(19) Europäisches Patentamt
European Patent Office
Office européen des brevets

(11) EP 4 056 667 B1

(12) EUROPEAN PATENT SPECIFICATION

(45) Date of publication and mention of the grant of the patent:
**02.08.2023 Bulletin 2023/31**

(21) Application number: **21171169.2**

(22) Date of filing: **29.04.2021**

(51) International Patent Classification (IPC):
***C09K 19/04*** (2006.01) ***C09K 19/34*** (2006.01)
***C09K 19/30*** (2006.01) ***C09K 19/12*** (2006.01)

(52) Cooperative Patent Classification (CPC):
**C09K 19/04; C09K 19/3066; C09K 19/3098; C09K 19/3491;** C09K 2019/0448; C09K 2019/122; C09K 2019/123; C09K 2019/124; C09K 2019/3004; C09K 2019/3009; C09K 2019/301; C09K 2019/3016; C09K 2019/3021; C09K 2019/3027

# (54) LIQUID-CRYSTAL MEDIUM COMPRISING POLYMERIZABLE COMPOUNDS

FLÜSSIGKRISTALLINES MEDIUM MIT POLYMERISIERBAREN VERBINDUNGEN

SUPPORT À CRISTAUX LIQUIDES COMPRENANT DES COMPOSÉS POLYMÉRISABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2021 EP 21161431**

(43) Date of publication of application:
**14.09.2022 Bulletin 2022/37**

(73) Proprietor: **Merck Patent GmbH**
**64293 Darmstadt (DE)**

(72) Inventors:
- **Fortte, Rocco**
  **64293 DARMSTADT (DE)**
- **Weegels, Leo**
  **64293 DARMSTADT (DE)**
- **Hsieh, Joseph (Chia-Sheng)**
  **TAIPEI 114 (TW)**
- **Hung, Eva (Yinghua)**
  **TAIPEI 114 (TW)**

(56) References cited:
**EP-A1- 3 587 536**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 056 667 B1

## Description

The present invention relates to a liquid-crystal (LC) medium comprising polymerizable compounds comprising a thioalkyl group, to its use for optical, electro-optical and electronic purposes, in particular in LC displays, especially in LC displays of the PSA (polymer sustained alignment) or SA (self-aligning) mode, to an LC display of the PSA or SA mode comprising the LC medium, and to a process of manufacturing the LC display.

The popularity of 8K and gaming monitors leads to an increased need for LC display (LCD) panels having higher refresh rates and thus for LC media having faster response times. Many of these LCD panels are using polymer stabilized (PS) or polymer sustained alignment modes (PSA) modes, like the PS-VA (vertically aligned), PS-IPS (in-plane switching) or PS-FFS (fringe-field switching) mode or modes derived therefrom, or self-aligned (SA) modes like SA-VA which are polymer stabilized.

In the PS or PSA mode a small amount, typically from 0.1 to 1% of one or more polymerizable mesogenic compounds, also known as RMs (reactive mesogens), is added to the LC medium. Such LC media are known, for instance, from EP 3 587 536 A1. After filling the LC medium into the display the RMs are then polymerized in situ by UV photopolymerization, while a voltage is applied to the electrodes of the display. Thereby a small tilt angle is generated in the LC molecules of the LC medium, which is stabilized by the polymerized RMs. The UV polymerization process, also referred to as "PSA process", is usually carried out in two steps, a first UV exposure step ("UV1 step"), with application of a voltage, to generate the tilt angle, and a second UV exposure step ("UV2 step"), without application of a voltage, to complete polymerization of the RMs.

In the SA-VA mode the alignment layers are omitted in the display.

Instead, a small amount, typically 0.1 to 2.5 %, of a self alignment (SA) additive is added to the LC medium, which induces the desired alignment, for example homeotropic or planar alignment, *in situ* by a self assembling mechanism. The SA additive usually contains an organic, mesogenic core group and attached thereto one or more polar anchor groups, for example hydroxy, carboxy, amino or thiol groups, which are capable of interacting with the substrate surface, causing the additives on the substrate surface to align and induce the desired alignment also in the LC molecules. The SA additive may also contain one or more polymerizable groups that can be polymerized under similar conditions as the RMs used in the PSA process. The LC medium may in addition to the SA additive also contain one or more RMs.

One method to reduce the response times in LC media for the PSA mode is for example by using compounds with an alkenyl group as componnts of the LC host mixture. However, this may lead to a decrease of the reliability of the mixture when being exposed to the UV light need to polymerize the RMs additives, which is believed to be caused by a reaction of the alkenyl compound with the polyimide of the alignment layer, which is especially problematic when using shorter UV wavelengths of less than 320nm. Therefore there is a tendency to use longer UV wavelengths for the PSA process.

UV-LED lamps have also been proposed for use in the PSA process, as they show less energy consumption, longer lifetime and more effective optical energy transfer to the LC medium due to the narrower emission peak, which allows to reduce the UV intensity and/or UV irradiation time. This enables a reduced tact time and savings in energy and production costs. The UV lapms currently available have higher wavelength emission, for example at 365nm.

Therefore, there is a need for polymerizable LC media which contain RMs that can be effectively polymerized at longer UV wavelengths.

In addition, there is a great demand for PSA or SA displays, and LC media and polymerizable compounds for use in such PSA or SA displays, which enable a high specific resistance at the same time as a large working-temperature range, short response times, even at low temperatures, and a low threshold voltage, a low tilt angle, a high tilt stability, a multiplicity of grey shades, high contrast and a broad viewing angle, have high reliability and high values for the VHR after UV exposure, and, in case of the polymerizable compounds, have low melting points and a high solubility in the LC host mixtures. In displays for mobile applications, it is especially desired to have available LC media that show low threshold voltage and high birefringence.

The present invention is based on the object of providing novel suitable materials, in particular RMs and LC media comprising the same, for use in PSA or SA displays, which do not have the disadvantages indicated above or do so to a reduced extent.

In particular, the invention is based on the object of LC media comprising RMs for use in PSA or SA displays, which enable very high specific resistance values, high VHR values, high reliability, low threshold voltages, short response times, high birefringence, show good UV absorption especially at longer UV wavelengths, preferably in the range from 340 to 380 nm, enable quick and complete polymerization of the RMs, allow the generation of a low tilt angle, preferably as quickly as possible, enable a high stability of the tilt angle even after longer time and/or after UV exposure, reduce or prevent the occurrence of "image sticking" and "ODF mura" in the display, and in case of the RMs polymerize as rapidly and completely as possible and show a high solubility in the LC media which are typically used as host mixtures in PSA or SA displays.

A further object of the invention is to provide LC media for use in PSA displays wherein the RMs exhibit both

fast polymerization speed and good reliability parameters, like high VHR or tilt stability.

A further object of the invention is the provision of novel LC media containing RMs, in particular for optical, electro-optical and electronic applications, and of suitable processes and intermediates for the preparation thereof.

A further object of the invention is to provide LC media containing RMs which show one or more of the following advantageous effects:

- they generate a tilt angle to a desired degree after exposure to UV-light,
- they lead to high tilt stability,
- they show good UV absorption especially at longer UV wavelengths, especially in the range from 340 to 400 nm, and enable quick and complete polymerization of the RMs at these wavelengths,
- they are suitable for use in PSA displays prepared by a polymerization process using UV-LED lamps,
- they enable good control of the the time range of the first UV-step in which the tilt angle is generated during UV-processing,
- they enable to keep the time range of the second UV-step, in which any residual RM is polymerized and the tilt angle is stabilized, as short as possible to minimize production cost,
- after the first and second UV-exposure step, the residue RMs have less or no negative effects on the LC-mixture performance parameters, such as VHR, tilt stability, etc.,
- they show good solubility and stability in LC-mixtures in a broad temperature range, preferably from -40 to 140°C.

It was found that one or more of these objects could be achieved by providing LC media as disclosed and claimed hereinafter.

The invention thus relates to an LC medium, characterized in that it comprises one or more polymerizable compounds of formula I

$$P\text{-}Sp\text{-}A^a\text{-}(Z^a\text{-}A^b)_z\text{-}R^b \qquad I$$

wherein the individual radicals, independently of each other and on each occurrence identically or differently, have the following meanings

$R^b$ P-Sp- or R,

R F, Cl, -CN or straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O-, $CR^0=CR^{00}$-, -C=C-,

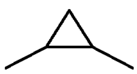, 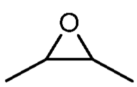, 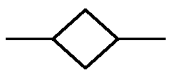, 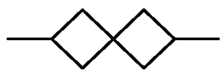,

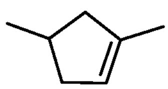, or 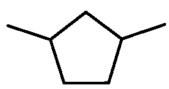,

in such a manner that O- and/or S-atoms are not directly connected with each other, and wherein one or more H atoms are each optionally replaced by F or Cl or P-Sp-,

P a polymerizable group,

Sp a spacer group which is optionally substituted by P, or a single bond,

$A^a$, $A^b$ an alicyclic, heterocyclic, aromatic or heteroaromatic group with 4 to 20 ring atoms, which is monocyclic or polycyclic and which is optionally substituted by one or more groups A, L or P-Sp-,

$Z^a$ -O-, -S-, -CO-, -CO-O-, -O-CO-, -O-CO-O-, $-OCH_2-$, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -CH=CF-, -CF=CH-, -C≡C-, -CH=CH-CO-O-, -O-CO-CH=CH-, $-CH_2-CH_2-CO-O-$, $-O-CO-CH_2-CH_2-$, $-CR^0R^{00}-$, or a single bond,

R°, $R^{00}$ H or alkyl having 1 to 12 C atoms,

A alkyl with 2 to 12, preferably 2 to 8, C-atoms, wherein one or more, preferably non-terminal, $CH_2$ groups are replaced by S, such that S atoms are not directly connected with each other, preferably thioalkyl with 1 to 7 C atoms, very preferably $SCH_3$,

L F, Cl, -CN, P-Sp- or straight chain, branched or cyclic alkyl having 1 to 25 C atoms, wherein one or more non-adjacent $CH_2$-groups are optionally replaced by -O-, -S-, -CO-, -CO-O-, -O-CO-,-O-CO-O-, $CR^0=CR^{00}-$, -C≡C-,

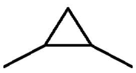, 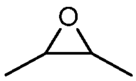, 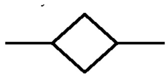, 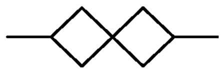,

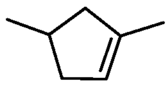, or 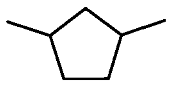,

in such a manner that O- and/or S-atoms are not directly connected with each other, and wherein one or more H atoms are each optionally replaced by P-Sp-, F or C!,

z 0, 1, 2, 3 or 4,

n1 1, 2, 3 or 4,

wherein the compounds of formula I contain at least one group $A^a$ or $A^b$ that is substituted by at least one group A,

and further comprises one or more compounds of formula II

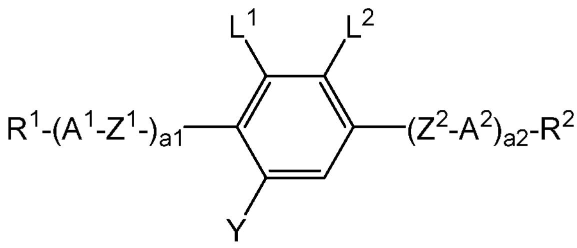

II

wherein the individual radicals, independently of each other and on each occurrence identically or differently, have the following meanings

$R^1$, $R^2$ straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O-, $CR^0=CR^{00}-$, -C=C-.

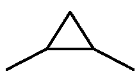, 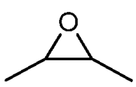, 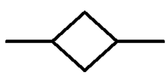, 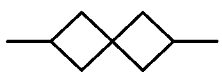,

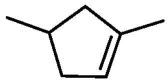 , or 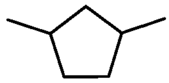 ,

in such a manner that O- and/or S-atoms are not directly connected with each other, and wherein one or more H atoms are each optionally replaced by F or Cl, preferably alkyl or alkoxy having 1 to 6 C atoms,

$A^1$, $A^2$ a group selected from the following formulae

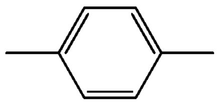
A1

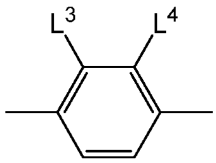
A2

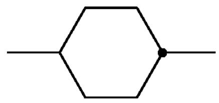
A3

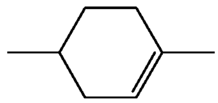
A4

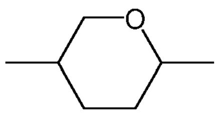
A5

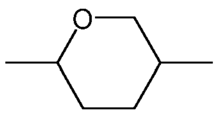
A6

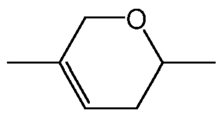
A7

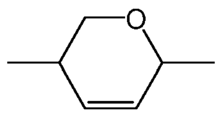
A8

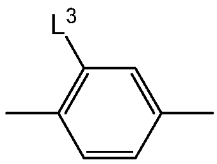
A9

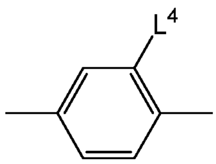
A10

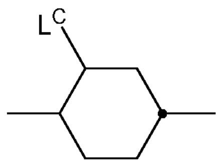
A11

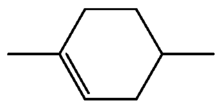
A12

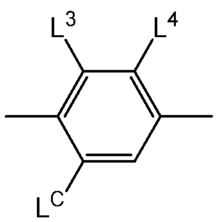
A13

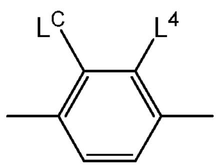
A14

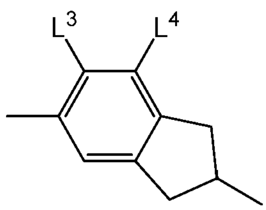
A15

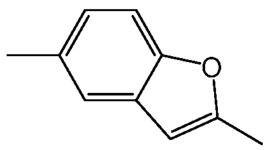
A16

preferably from formulae A1, A2, A3, A4, A5, A6, A9 and A10, very preferably from formulae A1, A2, A3, A4, A5, A9 and A10,

$Z^1$, $Z^2$ $-CH_2CH_2-$, -CH=CH-, $-CF_2O-$, $-OCF_2-$, $-CH_2O-$, $-OCH_2-$, -CO-O-, -O-CO-, $-C_2F_4-$, -CF=CF-, $-CH=CH-CH_2O-$ or a single bond, preferably a single bond,

$L^1$, $L^2$, $L^3$, $L^4$ F, Cl, $OCF_3$, $CF_3$, $CH_3$, $CH_2F$ or $CHF_2$, preferasbly F or Cl, very preferably F,

Y H, F, Cl, $CF_3$, $CHF_2$ or $CH_3$, preferably H or $CH_3$, very preferably H,

$L^C$ $CH_3$ or $OCH_3$, preferably $CH_3$,

a1 1 or 2,

a2 0 or 1.

The invention further relates to the use of the LC medium as described above and below in LC displays of the PSA or SA mode.

The LC medium preferably has negative dielectric anisotropy.

The polymerizable compounds of formula I are preferably selected such that they show absorption in the range from 340 to 400 nm, preferably from 350 to 370 nm.

The invention further relates to an LC medium comprising

a polymerizable component A) comprising, preferably consisting of, one or more polymerizable compounds, at least one of which is a compound of formula I,

a liquid-crystalline component B), hereinafter also referred to as "LC host mixture", comprising one or more liquid-crystalline compounds, at least one of which is a compound of formula II,

and

optionally one or more additives selected from the group consisting of selfalignment additives and stabilizers,

The invention furthermore relates to a process for preparing an LC medium as described above and below, comprising the steps of mixing one or more polymerizable compounds of formula I with one or more compounds of formula II and optionally with further LC compounds and/or additives.

The invention furthermore relates to an LC display comprising an LC medium according to the invention as described above and below, which is a PSA or SA display, preferably a PS-VA, PS-IPS, PS-FFS, PS-UB-FFS or SA-VA display.

The invention furthermore relates to an LC display comprising an LC medium as described above and below wherein the polymerizable compounds are present in polymerized form, which is preferably a PSA or SA display, very preferably a PS-VA, PS-IPS, PS-FFS, PS-UB-FFS or SA-VA display.

The invention furthermore relates to an LC display of the PSA type comprising two substrates, at least one which is transparent to light, an electrode provided on each substrate or two electrodes provided on only one of the substrates, and located between the substrates a layer of an LC medium as described above and below, wherein the polymerizable compounds are polymerized between the substrates of the display by UV photopolymerization.

The invention furthermore relates to a process for manufacturing an LC display as described above and below, comprising the steps of filling or otherwise providing an LC medium as described above and below between the substrates of the display, and polymerizing the polymerizable compounds, preferably by irradiation with UV light, preferably having a wavelength >340nm, preferably in the range from 340 to 400 nm, more preferably in the range from 340 to 380 nm, very preferably in the range from 350 to <370 nm, most preferably in the range from 355 to 368 nm, and preferably while a voltage is applied to the electrodes of the display.

The invention furthermore relates to a process for manufacturing an LC display as described above and below, wherein irradiation of the polymerizable compounds is carried out using a UV-LED lamp.

The LC media according to the present invention show the following advantageous properties when used in PSA displays:

- a suitable tilt generation which is inside a certain process window,
- fast polymerization leading to minimal residues of RM after the UV-process,
- a high voltage-holding-ratio after the UV-process,
- good tilt stability,
- sufficient stability against heat,
- sufficient solubility in organic solvents typically used in display manufacture.

In addition the LC media according to the present invention help to solve one or more of the following problems:

- to generate a tilt angle to a desired degree after exposure to UV-light,
- to provide a high tilt stability,
- to show good UV absorption especially at longer UV wavelengths, preferably in the range from 340 to 400 nm, more preferably in the range from 340 to 380 nm, very preferably in the range from 350 to <370 nm, most preferably in the range from 355 to 368 nm, and enable quick and complete polymerization of the RMs at these wavelengths,
- to be suitable for use in PSA displays prepared by a polymerization process using UV-LED lamps,
- to control enable of the time range of the first UV-step in which the tilt angle is generated during UV-processing,
- to keep the time range of the second UV-step as short as possible to minimize production cost,
- after the first and second UV-exposure step, to reduce or avoid any negative effects of the residual RM on the LC mixture performance parameters, such as VHR, tilt stability, etc.
- to provide good solubility and stability in the LC host mixture in a broad temperature range, preferably from -40°C

to ca. 140 °C.

An alkenyl group in the compounds of formula II or other components of the LC medium as disclosed below is not considered to be within the meaning of the term "polymerizable group" as used herein. The conditions for the polymerization of the polymerizable compounds of the LC medium are preferably selected such that alkenyl substituents do not participate in the polymerization reaction. Preferably the LC media disclosed and claimed in the present application do not contain an additive that initiates or enhances the participation of the alkenyl group in a polymerization reaction.

Unless stated otherwise, the polymerizable compounds and the compounds of formula II are preferably selected from achiral compounds.

As used herein, the expression "UV light having a wavelength of" followed by a given range of wavelengths (in nm), or by a given lower or upper wavelength limit (in nm), means that the UV emission spectrum of the respective radiation source has an emission peak, which is preferably the highest peak in the respective spectrum, in the given wavelength range or above the given lower wavelength limit or below the given upper wavelength limit and/or that the UV absorption spectrum of the respective chemical compound has a long or short wavelength tail that extends into the given wavelength range or above the given lower wavelength limit or below the given upper wavelength limit.

As used herein, the term "full width half maximum" or "FWHM" means the width of a spectrum curve measured between those points on the *y*-axis which are half the maximum amplitude.

As used herein, the term "substantially transmissive" means that the filter transmits a substantial part, preferably at least 50% of the intensity, of incident light of the desired wavelength(s). As used herein, the term "substantially blocking" means that the filter does not transmit a substantial part, preferably at least 50% of the intensity, of incident light of the undesired wavelengths. As used herein, the term "desired (undesired) wavelength" e.g. in case of a band pass filter means the wavelengths inside (outside) the given range of $\lambda$, and in case of a cut-off filter means the wavelengths above (below) the given value of $\lambda$.

As used herein, the terms "active layer" and "switchable layer" mean a layer in an electrooptical display, for example an LC display, that comprises one or more molecules having structural and optical anisotropy, like for example LC molecules, which change their orientation upon an external stimulus like an electric or magnetic field, resulting in a change of the transmission of the layer for polarized or unpolarized light.

As used herein, the terms "tilt" and "tilt angle" will be understood to mean a tilted alignment of the LC molecules of an LC medium relative to the surfaces of the cell in an LC display (here preferably a PSA display), and will be understood to be inclusive of "pretilt" and "pretilt angle". The tilt angle here denotes the average angle (< 90°) betwee n the longitudinal molecular axes of the LC molecules (LC director) and the surface of the plane-parallel outer plates which form the LC cell. A low absolute value for the tilt angle (i.e. a large deviation from the 90° angle) corresponds to a large tilt here. A suitable method for measurement of the tilt angle is given in the examples. Unless indicated otherwise, tilt angle values disclosed above and below relate to this measurement method.

As used herein, the terms "reactive mesogen" and "RM" will be understood to mean a compound containing a mesogenic or liquid crystalline skeleton, and one or more functional groups attached thereto which are suitable for polymerization and are also referred to as "polymerizable group" or "P".

Unless stated otherwise, the term "polymerizable compound" as used herein will be understood to mean a polymerizable monomeric compound.

An SA-VA display according to the present invention will be of the polymer stabilised mode as it contains, or is manufactured by use of, an LC medium containing RMs of formula I and II. Consequently as used herein, the term "SA-VA display" when referring to a display according to the present invention will be understood to refer to a polymer stabilised SA-VA display even if not explicitly mentioned.

As used herein, the term "low-molecular-weight compound" will be understood to mean to a compound that is monomeric and/or is not prepared by a polymerization reaction, as opposed to a "polymeric compound" or a "polymer".

As used herein, the term "unpolymerizable compound" will be understood to mean a compound that does not contain a functional group that is suitable for polymerization under the conditions usually applied for the polymerization of the RMs.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerization. Typical mesogenic groups are, for example, rigid rod- or disc-shaped units. An overview of the terms and definitions used in connection with mesogenic or LC compounds is given in Pure Appl. Chem. 2001, 73(5), 888 and C. Tschierske, G. Pelzl, S. Diele, Angew. Chem. 2004, 116, 6340-6368.

The term "spacer group", hereinafter also referred to as "Sp", as used herein is known to the person skilled in the art and is described in the literature, see, for example, Pure Appl. Chem. 2001, 73(5), 888 and C. Tschierske, G.

Pelzl, S. Diele, Angew. Chem. 2004, 116, 6340-6368. As used herein, the terms "spacer group" or "spacer" mean a flexible group, for example an alkylene group, which connects the mesogenic group and the polymerizable group(s) in a polymerizable mesogenic compound.

Above and below,

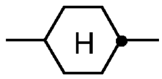

denotes a trans-1 ,4-cyclohexylene ring, and

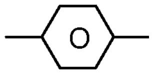

denotes a 1,4-phenylene ring.

In a group

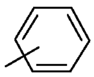

the single bond shown between the two ring atoms can be attached to any free position of the benzene ring.

If in the formulae shown above and below a group $R^{1-12}$, $R^Q$, R or L denotes an alkyl radical and/or an alkoxy radical, this may be straight-chain or branched. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy.

If in the formulae shown above and below a group $R^{1-13}$, $R^{51}$, $R^{52}$, $R^Q$, R, $R^{2A}$, $R^{2B}$, $R^{IIIA}$, $R^{1N}$, $R^{2N}$, $R^{B1}$, $R^{B2}$, $R^{CR1}$, $R^{CR2}$, R or L denotes an alkyl radical and/or an alkoxy radical, this may be straight-chain or branched. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy.

If in the formulae shown above and below a group $R^{1-13}$, $R^{51}$, $R^{52}$, $R^Q$, R, $R^{2A}$, $R^{2B}$, $R^{IIIA}$, $R^{1N}$, $R^{2N}$, $R^{B1}$, $R^{B2}$, $R^{CR1}$, $R^{CR2}$, R or L denotes an alkyl radical wherein one or more $CH_2$ groups are replaced by S, this may be straight-chain or branched. It is preferably straight-chain, has 1, 2, 3, 4, 5, 6 or 7 C atoms and accordingly preferably denotes thiomethyl, thioethyl, thiopropyl, thiobutyl, thiopentyl, thiohexyl or thioheptyl.

Oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxadecyl.

If in the formulae shown above and below a group $R^{1-13}$, $R^{51}$, $R^{52}$, $R^Q$, R, $R^{2A}$, $R^{2B}$, $R^{IIIA}$, $R^{1N}$, $R^{2N}$, $R^{B1}$, $R^{B2}$, $R^{CR1}$, $R^{CR2}$, R or L denotes an alkoxy or oxaalkyl group it may also contain one or more additional oxygen atoms, provided that oxygen atoms are not linked directly to one another.

In another preferred embodiment, one or more of $R^{1-13}$, $R^{51}$, $R^{52}$, $R^Q$, R, $R^{2A}$, $R^{2B}$, $R^{IIIA}$, $R^{1N}$, $R^{2N}$, $R^{B1}$, $R^{B2}$, $R^{CR1}$, $R^{CR2}$, R or L are selected from the group consisting of

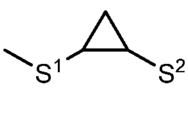, 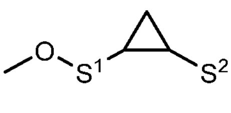, 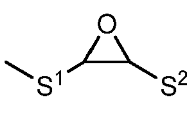, 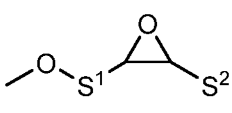,

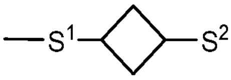, 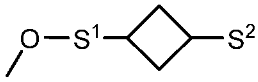, 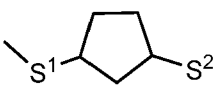, 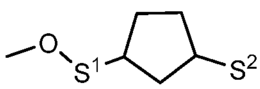,

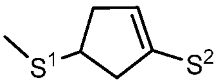, 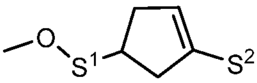, 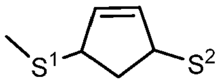, 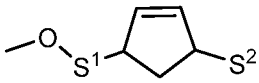,

$-S^1-F$, $-O-S^1-F$, $-O-S_1-O-S_2$, wherein $S^1$ is $C_{1-12}$-alkylene or $C_{2-12}$-alkenylene and $S^2$ is H, $C_{1-12}$-alkyl or $C_{2-12}$-alkenyl, and very preferably are selected from the group consisting of

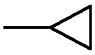, 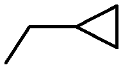, 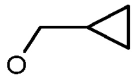, 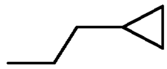, 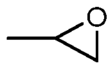, 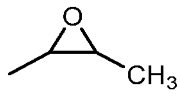,

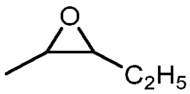, 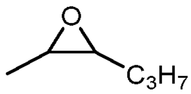, 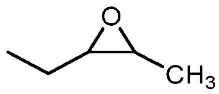, 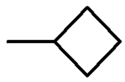,

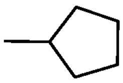, 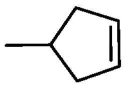, 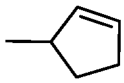, 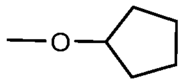, 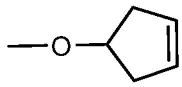

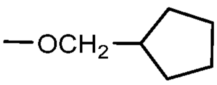, 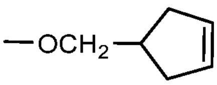, 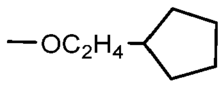, 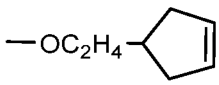,

$-OCH_2OCH_3$, $-O(CH_2)_2OCH_3$, $-O(CH_2)_3OCH_3$, $-O(CH_2)_4OCH_3$, $-O(CH_2)_2F$, $-O(CH_2)_3F$ and $-O(CH_2)_4F$.

If in the formulae shown above and below a group $R^{1-13}$, $R^{51}$, $R^{52}$, $R^Q$, R, $R^{2A}$, $R^{2B}$, $R^{IIIA}$, $R^{1N}$, $R^{2N}$, $R^{B1}$, $R^{B2}$, $R^{CR1}$, $R^{CR2}$, R or L denotes an alkyl radical in which one $CH_2$ group has been replaced by -CH=CH-, this may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

If in the formulae shown above and below a group $R^{1-13}$, $R^{51}$, $R^{52}$, $R^Q$, R, $R^{2A}$, $R^{2B}$, $R^{IIIA}$, $R^{1N}$, $R^{2N}$, $R^{B1}$, $R^{B2}$, $R^{CR1}$, $R^{CR2}$, R or L denotes an alkyl or alkenyl radical which is at least monosubstituted by halogen, this radical is preferably straight-chain, and halogen is preferably F or Cl. In the case of polysubstitution, halogen is preferably F. The resultant radicals also include perfluorinated radicals. In the case of monosubstitution, the fluorine or chlorine substituent may be in any desired position, but is preferably in the ω-position.

Halogen is preferably F or Cl, very preferably F.

The group $-CR^0=CR^{00}-$ is preferably -CH=CH-. -OC-, -CO-, -C(=O)- and -C(O)- denote a carbonyl group, i.e.

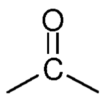.

Preferred substituents L, are, for example, F, Cl, Br, I, -CN, $-NO_2$, -NCO, - NCS, -OCN, -SCN, $-C(=O)N(R^x)_2$, -C(=O)Y', $-C(=O)R^x$, $-N(R^x)_2$, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or C!, optionally substituted silyl having 1 to 20 Si atoms, or optionally substituted aryl having 6 to 25, preferably 6 to 15, C atoms,

wherein $R^x$ denotes H, F, Cl, CN, or straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, Cl, P- or P-Sp-, and

$Y^1$ denotes halogen.

Particularly preferred substituents L are, for example, F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, furthermore phenyl.

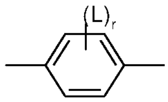

is preferably

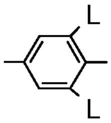 , 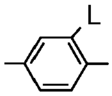 , 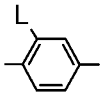 or 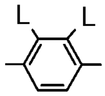 ,

in which L has one of the meanings indicated above.

The polymerizable group P is a group which is suitable for a polymerization reaction, such as, for example, free-radical or ionic chain polymerization, polyaddition or polycondensation, or for a polymer-analogous reaction, for example addition or condensation onto a main polymer chain. Particular preference is given to groups for chain polymerization, in particular those containing a C=C double bond or -C≡C- triple bond, and groups which are suitable for polymerization with ring opening, such as, for example, oxetane or epoxide groups.

Preferred groups P are selected from the group consisting of $CH_2$-$CW^1$-CO-O-, $CH_2$=$CW^1$-CO-,

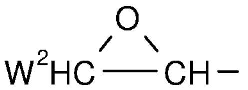 , 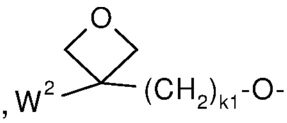 ,

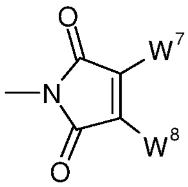 , 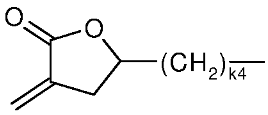 , 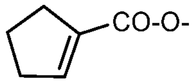 ,

$CH_2$=$CW^2$-$(O)_{k3}$-, $CW^1$=CH-CO-$(O)_{k3}$-, $CW^1$=CH-CO-NH-, $CH_2$=$CW^1$-CO-NH-, $CH_3$-CH=CHO-, $(CH_2=CH)_2$CH-OCO-, $(CH_2=CH-CH_2)_2$CH-OCO-, $(CH_2=CH)_2$CH-O-, $(CH_2=CH-CH_2)_2$N-, $(CH_2=CH-CH_2)_2$N-CO-, HO-$CW^2W^3$-, HS-$CW^2W^3$-, $HW^2$N-, HO-$CW^2W^3$-NH-, $CH_2$=$CW^1$-CO-NH-, $CH_2$=CH-$(COO)_{k1}$-Phe-$(O)_{k2}$-, $CH_2$=CH-$(CO)_{k1}$-Phe-$(O)_{k2}$-, Phe-CH=CH-, HOOC-, OCN- and $W^4W^5W^6$Si-, in which $W^1$ denotes H, F, Cl, CN, $CF_3$, phenyl or alkyl having 1 to 5 C atoms, in particular H, F, Cl or $CH_3$, $W^2$ and $W^3$ each, independently of one another, denote H or alkyl having 1 to 5 C atoms, in particular H, methyl, ethyl or n-propyl, $W^4$, $W^5$ and $W^6$ each, independently of one another, denote Cl, oxaalkyl or oxacarbonylalkyl having 1 to 5 C atoms, $W^7$ and $W^8$ each, independently of one another, denote H, Cl or alkyl having 1 to 5 C atoms, Phe denotes 1 ,4-phenylene, which is optionally substituted by one or more radicals L as defined above which are other than P-Sp-, $k_1$, $k_2$ and $k_3$ each, independently of one another, denote 0 or 1, $k_3$ preferably denotes 1, and $k_4$ denotes an integer from 1 to 10.

Very preferred groups P are selected from the group consisting of $CH_2$-$CW^1$-CO-O-, $CH_2$=$CW^1$-CO-,

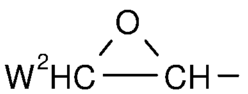 , 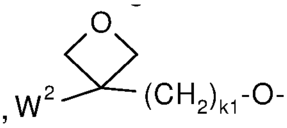 ,

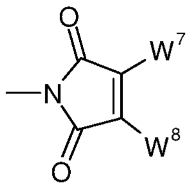, 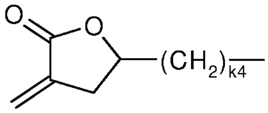, 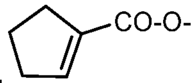,

$CH_2=CW^2-O-$, $CH_2=CW^2-$, $CW^1=CH-CO-(O)_{k3}-$, $CW^1=CH-CO-NH-$, $CH_2=CW^1-CO-NH-$, $(CH_2=CH)_2CH-OCO-$, $(CH_2=CH-CH_2)_2CH-OCO-$, $(CH_2=CH)_2CH-O-$, $(CH_2=CH-CH_2)_2N-$, $(CH_2=CH-CH_2)_2N-CO-$, $CH_2-CW^1-CO-NH-$, $CH_2=CH-(COO)_{k1}-Phe-(O)_{k2}-$, $CH_2=CH-(CO)_{k1}-Phe-(O)_{k2}-$, Phe-CH=CH- and $W^4W^5W^6Si-$, in which $W^1$ denotes H, F, Cl, CN, $CF_3$, phenyl or alkyl having 1 to 5 C atoms, in particular H, F, Cl or $CH_3$, $W^2$ and $W^3$ each, independently of one another, denote H or alkyl having 1 to 5 C atoms, in particular H, methyl, ethyl or n-propyl, $W^4$, $W^5$ and $W^6$ each, independently of one another, denote Cl, oxaalkyl or oxacarbonylalkyl having 1 to 5 C atoms, $W^7$ and $W^8$ each, independently of one another, denote H, Cl or alkyl having 1 to 5 C atoms, Phe denotes 1,4-phenylene, $k_1$, $k_2$ and $k_3$ each, independently of one another, denote 0 or 1, $k_3$ preferably denotes 1, and $k_4$ denotes an integer from 1 to 10.

Very particularly preferred groups P are selected from the group consisting of $CH_2=CW^1-CO-O-$, in particular $CH_2=CH-CO-O-$, $CH_2=C(CH_3)-CO-O-$ and $CH_2=CF-CO-O-$, furthermore $CH_2=CH-O-$, $CH_2=CH_2CH-O-CO-$,

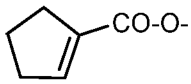,

$(CH_2=CH)_2CH-O-$,

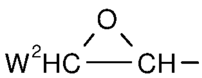

and

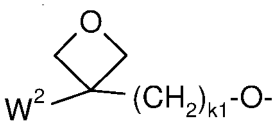.

Further preferred polymerizable groups P are selected from the group consisting of vinyloxy, acrylate, methacrylate, fluoroacrylate, chloroacrylate, oxetane and epoxide, most preferably from acrylate and methacrylate.

Very preferably all polymerizable groups in the polymerizable compound have the same meaning.

If the spacer group Sp is different from a single bond, it is preferably of the formula Sp"-X", so that the respective radical P-Sp- conforms to the formula P-Sp"-X"-, wherein

| | |
|---|---|
| Sp" | denotes linear or branched alkylene having 1 to 20, preferably 1 to 12, C atoms, which is optionally mono- or polysubstituted by F, C!, Br, I or CN and in which, in addition, one or more non-adjacent $CH_2$ groups may each be replaced, independently of one another, by -O-, -S-, -NH-, $-N(R^0)-$, $-Si(R^0R^{00})-$, -CO-, -CO-O-, -O-CO-, -O-CO-O-, -S-CO-, -CO-S-, $-N(R^{00})-CO-O-$, $-O-CO-N(R^0)-$, $-N(R^0)-CO-N(R^{00})-$, -CH=CH- or -C=C- in such a way that O and/or S atoms are not linked directly to one another, |
| X" | denotes -O-, -S-, -CO-, -CO-O-, -O-CO-, -O-CO-O-, -CO-N(R°)-, -N(R°)-CO-, $-N(R0)-CO-N(R^{00})-$, $-OCH_2-$, $-CH_2O-$, $-SCH_2-$, $-CH_2S-$, $-CF_2O-$, $-OCF_2-$, $-CF_2S-$, $-SCF_2-$, $-CF_2CH_2-$, $-CH_2CF_2-$, $-CF_2CF_2-$ , -CH=N-, -N=CH-, -N=N-, $-CH=CR^0-$, $-CY^2=CY^3-$, -C≡C-, -CH=CH-CO-O-, -O-CO-CH=CH- or a single bond, |
| R° and R°° | each, independently of one another, denote H or alkyl having 1 to 20 C atoms, and |
| $Y^2$ and $Y^3$ | each, independently of one another, denote H, F, Cl or CN. |

X" is preferably -O-, -S-, -CO-, -COO-, -OCO-, -O-COO-, $-CO-NR^0-$, $-NR^0-CO-$, $-NR^0-CO-NR^{00}-$ or a single bond.

Typical spacer groups Sp and -Sp"-X"- are, for example, $-(CH_2)_{p1}-$, $-(CH_2)_{p1}-O-$, $-(CH_2)_{p1}-O-CO-$, $-(CH_2)_{p1}-CO-O-$, $-(CH_2)_{p1}-O-CO-O-$, $-(CH_2CH_2O)_{q1}-CH_2CH_2-$, $-CH_2CH_2-S-CH_2CH_2-$, $-CH_2CH_2-NH-CH_2CH_2-$ or $-(SiR^0R^{00}-O)_{p1}-$, in which p1 is an integer from 1 to 12, q1 is an integer from 1 to 3, and R° and $R^{00}$ have the meanings indicated above.

Particularly preferred groups Sp and -Sp"-X"- are $-(CH_2)_{p1}-$, $-(CH_2)_{p1}-O-$, - $(CH_2)_{p1}-O-CO-$, $-(CH_2)_{p1}-CO-O-$, $-(CH_2)_{p1}-O-CO-O-$, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

In a preferred embodiment of the invention the compounds of formula I and its subformulae contain a spacer group Sp that is substituted by one or more polymerizable groups P, so that the group Sp-P corresponds to $Sp(P)_s$, with s being ≥2 (branched polymerizable groups).

Preferred compounds of formula I according to this preferred embodiment are those wherein s is 2, i.e. compounds which contain a group $Sp(P)_2$. Very preferred compounds of formula I according to this preferred embodiment contain a group selected from the following formulae:

-X-alkyl-CHPP S1

-X-alkyl-CH((CH2)aaP)((CH2)bbP) S2

$-X-N((CH_2)_{aa}P)((CH_2)_{bb}P)$ S3

$-X-alkyl-CHP-CH_2-CH_2P$ S4

$-X-alkyl-C(CH_2P)(CH_2P)-C_{aa}H_{2aa+1}$ S5

$-X-alkyl-CHP-CH_2P$ S6

$-X-alkyl-CPP-C_{aa}H_{2aa+1}$ S7

$-X-alkyl-CHPCHP-C_{aa}H_{2aa+1}$ S8

in which P is as defined in formula I,

alkyl denotes a single bond or straight-chain or branched alkylene having 1 to 12 C atoms which is unsubstituted or mono- or polysubstituted by F, Cl or CN and in which one or more non-adjacent $CH_2$ groups may each, independently of one another, be replaced by $-C(R^0)=C(R^0)-$, -C=C-, $-N(R^0)-$, -O-, -S-, -CO-, -CO-O-, -O-CO-, -O-CO-O- in such a way that O and/or S atoms are not linked directly to one another, where R° has the meaning indicated above,

aa and bb each, independently of one another, denote 0, 1, 2, 3, 4, 5 or 6,

X has one of the meanings indicated for X", and is preferably O, CO, $SO_2$, O-CO-, CO-O or a single bond.

Preferred spacer groups $Sp(P)_2$ are selected from formulae S1, S2 and S3.

Very peferred spacer groups $Sp(P)_2$ are selected from the following subformulae:

-CHPP S1a

-O-CHPP S1b

$-CH_2-CHPP$ S1c

$-OCH_2-CHPP$ S1d

$-CH(CH_2-P)(CH_2-P)$ S2a

$-OCH(CH_2-P)(CH_2-P)$ S2b

$-CH_2-CH(CH_2-P)(CH_2-P)$ S2c

$-OCH_2-CH(CH_2-P)(CH_2-P)$ S2d

$-CO-NH((CH_2)_2P)((CH_2)_2P)$ S3a

P is preferably selected from the group consisting of vinyloxy, acrylate, methacrylate, fluoroacrylate, chloroacrylate, oxetane and epoxide, very preferably from acrylate and methacrylate, most preferably from methacrylate.

Further preferably all polymerizable groups P that are present in the same compound have the same meaning, and very preferably denote acrylate or methacrylate, most preferably methacrylate.

Sp preferably denotes a single bond or $-(CH_2)_{p1}-$, $-(CH_2)_{p2}-CH=CH-(CH_2)_{p3}-$, $-O-(CH_2)_{p1}-$, $-O-CO-(CH_2)_{p1}$, or $-CO-O-(CH_2)_{p1}$, wherein p1 is 2, 3, 4, 5 or 6, preferably 2 or 3, p2 and p3 are independently of each other 0, 1, 2 or 3 and, if Sp is $-O-(CH_2)_{p1}-$, $-O-CO-(CH_2)_{p1}$ or $-CO-O-(CH_2)_{p1}$ the O-atom or CO-group, respectively, is linked to the benzene ring.

Further preferably at least one group Sp is a single bond.

Further preferably at least one group Sp is different from a single bond, and is preferably selected from $-(CH_2)_{p1}-$, $-(CH_2)_{p2}-CH=CH-(CH_2)_{p3}-$, $-O-(CH_2)_{p1}-$, $-O-CO-(CH_2)_{p1}$, or $-CO-O-(CH_2)_{p1}$, wherein p1 is 2, 3, 4, 5 or 6, preferably 2 or 3, p2 and p3 are independently of each other 0, 1, 2 or 3 and, if Sp is $-O-(CH_2)_{p1}-$, $-O-CO-(CH_2)_p$, or $-CO-O-(CH_2)_{p1}$, the O-atom or CO-group, respectively, is linked to the benzene ring.

Very preferably Sp is different from a single bond, and is selected from - $(CH_2)_2-$, $-(CH_2)_3-$, $-(CH_2)_4-$, $-O-(CH_2)_2-$, $-O-(CH_2)_3-$, $-O-CO-(CH_2)_2$ and $-COO-(CH)_2-$, wherein the O atom or the CO group is attached to the benzene ring.

In the compounds of formula I and its subformulae as described above and below, P is preferably selected from the group consisting of vinyloxy, acrylate, methacrylate, fluoroacrylate, chloroacrylate, oxetane and epoxide, very preferably from acrylate and methacrylate, most preferably methacrylate.

Further preferred are compounds of formula I and its subformulae as described above and below, wherein all polymerizable groups P that are present in the compound have the same meaning, and very preferably denote acrylate or methacrylate, most preferably methacrylate.

Further preferred are compounds of formula I and its subformulae as described above and below, which contain one, two, three or four groups P-Sp, very preferably two or three groups P-Sp..

Further preferred are compounds of formula I and its subformulae as described above and below, wherein $R^b$ is P-Sp-.

Further preferred are compounds of formula I and its subformulae as described above and below, wherein Sp denotes a single bond or - $(CH_2)_{p1}-$, $-O-(CH_2)_{p1}-$, $-O-CO-(CH_2)_{p1}$, or $-CO-O-(CH_2)_{p1}$, wherein p1 is 2, 3, 4, 5 or 6, and, if Sp is $-O-(CH_2)_{p1}-$, $-O-CO-(CH_2)_{p1}$ or $-CO-O-(CH_2)_{p1}$ the O-atom or CO-group, respectively, is linked to the benzene ring.

Further preferred are compounds of formula I and its subformulae as described above and below, wherein at least one group Sp is a single bond.

Further preferred are compounds of formula I and its subformulae as described above and below, wherein at least one group Sp is different from a single bond, and is selected from $-(CH_2)_{p1}-$, $-O-(CH_2)_{p1}-$, $-O-CO-(CH_2)_{p1}$, or $-CO-O-(CH_2)_{p1}$, wherein p1 is 2, 3, 4, 5 or 6, and, if Sp is $-O-(CH_2)_{p1}-$, $-O-CO-(CH_2)_{p1}$, or $-CO-O-(CH_2)_{p1}$ the O-atom or CO-group, respectively, is linked to the benzene ring.

Very preferred are compounds of formula I and its subformulae as described above and below, wherein at least one group Sp is different from a single bond, and is selected from $-(CH_2)_2-$, $-(CH_2)_3-$, $-(CH_2)_4-$, $-O-(CH_2)_2-$, $-O-(CH_2)_3-$, $-O-CO-(CH_2)_2$ and $-CO-O-(CH)_2-$, wherein the O atom or the CO group is attached to the benzene ring.

Preferably A in formula I and its subformulae denotes thioalkyl with 1 to 7 C atoms which is preferably straight-chain or branched, most preferably straight-chain, and is preferably selected from $-SCH_3$, $-SC_2H_5$ and $-SC_3H_7$, very preferably $-SCH_3$ or $-SC_2H_5$, most preferably $-SCH_3$. Further preferably A is selected from $-CH_2-S-CH_3$ or $-CH_2-S-C_2H_5$.

Preferably $A^a$ and $A^b$ in formula I are selected from the group consisting of 1,4-phenylene, 1,3-phenylene, naphthalene-1,4-diyl, naphthalene-2,6-diyl, phenanthrene-2,7-diyl, 9,10-dihydro-phenanthrene-2,7-diyl, anthracene-2,7-diyl, fluorene-2,7-diyl, coumarine, flavone, where, in addition, one or more CH groups in these groups may be replaced by N, cyclohexane-1,4-diyl, in which, in addition, one or more non-adjacent $CH_2$ groups may be replaced by O and/or S, 1,4-cyclohexenylene, bicycle[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, all of which are optionally substituted by one or more groups A, L or P-Sp-, and wherein at least one group $A^a$ or $A^b$ , preferably at least one aryl or heteroaryl group $A^a$ or $A^b$, is substituted by at least one group A.

Very preferably $A^a$ and $A^b$ in formula I are selected from the group consisting of benzene, naphthalene, phenanthrene, anthracene, dibenzofuran or dibenzothiophene, all of which are optionally substituted by one or more groups

A, L or P-Sp-, and wherein at least one group $A^a$ or $A^b$ is substituted by at least one group A.

Preferably z in formula I is 0, 1 or 2, very preferably 1 or 2.

Preferably $-A^a-(Z^a-A^b)_z-$ in formula I denotes benzene, biphenylene, p-terphenylene (1,4-diphenylbenzene), m-terphenylene (1,3-diphenylbenzene), naphthylene, 2-phenyl-naphthylene, phenanthrene or anthracene, dibenzofuran or dibenzothiophene, all of which are optionally substituted by one or more groups A, L or P-Sp- and are at least monosubstituted by A.

Further preferred are compounds of formula I and its subformulae that contain at least one group $A^a$ or $A^b$ that is not substituted by L or A.

Further preferred are compounds of formula I and its subformulae as described above and below, wherein $-A^a-(Z^a-A^b)_z-$ is selected from the following formulae

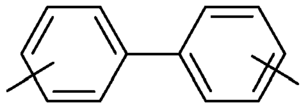

A1

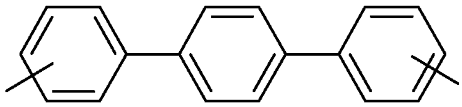

A2

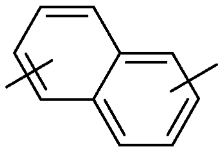

A3

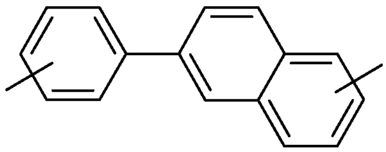

A4

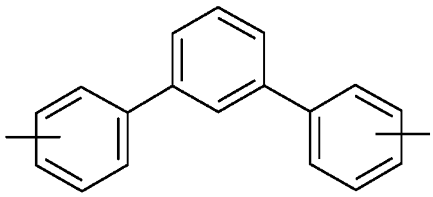

A5

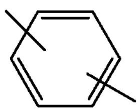

A6

wherein the single bonds depict the linkages to the groups P-Sp and $R^b$ in formula I, and wherein benzene rings are optionally further substituted by one or more groups A, L or P-Sp- as defined in formula I, and at least one benzene ring is substituted by at least one group A, and preferably at least one benzene ring does not carry any substituents A or L.

Preferred are formulae A1, A2 and A5, more preferred are formulae A1 and A2, most preferred is formula A1.

Preferred compounds of formula I are selected from the following subformulae

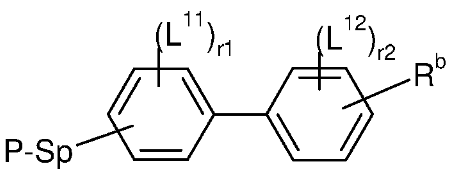

I1

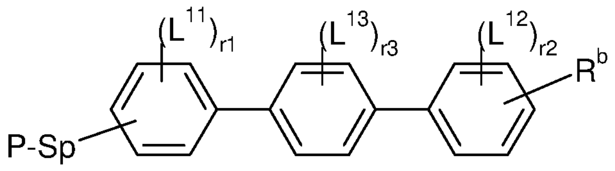

I2

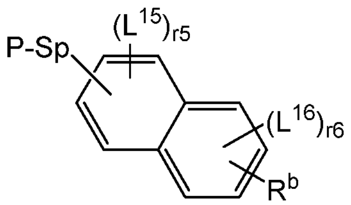

I3

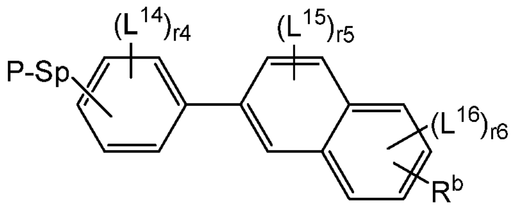

I4a

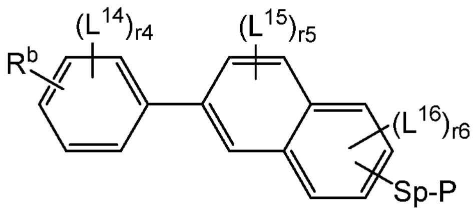

I4b

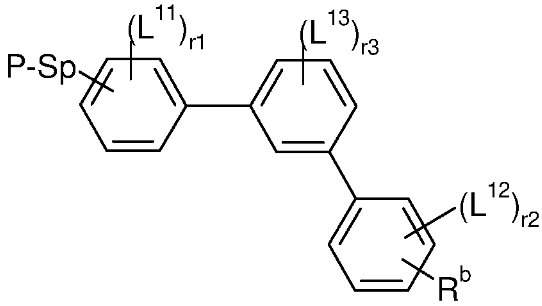

I5

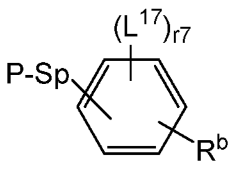

I6

wherein the individual radicals, independently of each other, and on each occurrence identically or differently, have the following meanings

| | |
|---|---|
| A, P, Sp, $R^b$ | one of the meanings given in formula I or one of the preferred meanings as given above and below, |
| $L^{11}$ to $L^{17}$ | L or A, preferably F, C!, $OCH_3$, $OCF_3$, CN, P-Sp or A, |
| r1, r2, r3, r4 | 0, 1, 2, 3 or 4, preferably 0, 1 or 2, very preferably 0 or 1, wherein in formula I1, I2 and I5 r1+r2+r3 ≥1, |

r5, r6, 0, 1, 2 or 3, preferably 0, 1 or 2, very preferably 0 or 1, wherein in formula I3 r5+r6 ≥1 and in formula I4a and I4b r4+r5+r6≥1,

r7 1, 2, 3 or 4, preferably 1 or 2, very preferably 1,

wherein the compounds contain at least group $L^{11}$ to $L^{17}$ that is A.

Preferred are compounds of formula I1, I2 and I5, very preferred are compounds of formulae I1 and I2, most preferred are compounds of formula I1.

Further preferred are compounds of formula I12

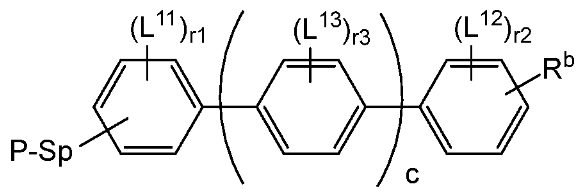

I12

wherein P, Sp, $R^b$, $L^{11}$, $L^{12}$, $L^{13}$, r1, r2 and r3 have the meanings given above and below, r1+r2+r3 ≥, and c is 0, 1 or 2, preferably 0 or 1.

Preferred subformulae of formula I12 include the preferred subformulae of formulae I1 and I2 as listed below.

Further preferred are compounds of formula I, 11-16 and I12 wherein $R^b$ denotes P-Sp.

Further preferred are compounds of formula I, 11-16 and I12 wherein $R^b$ is different from P-Sp, and preferably denotes F, Cl, CN or straight chain, branched or cyclic alkyl having 1 to 25 C atoms, wherein one or more non-adjacent $CH_2$-groups are optionally replaced by -O-, -S-, -CO-, -CO-O-, - O-CO-, -O-CO-O- in such a manner that O- and/or S-atoms are not directly connected with each other, and wherein one or more H atoms are each optionally replaced by F or Cl.

Further preferred are compounds of formula I1, I2, I5 wherein at least one of r1, r2 and r3 is 0, compounds of formula I3 wherein at least one of r4 and r5 is 0, compounds of formula I4a and I4b wherein at least one of r4, r5 and r6 is 0, and compounds of formula I12 wherein, if c is 0 then one of r1 and r2 is 0, and if c is 1 or 2 then at least one of r1, r2 and r3 is 0.

Preferred compounds of formula I, I1 to I6 and I12 are selected from the following subformulae:

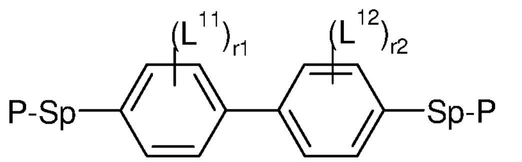

I1A

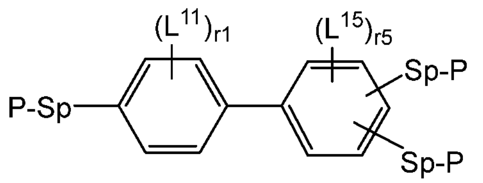

I1B

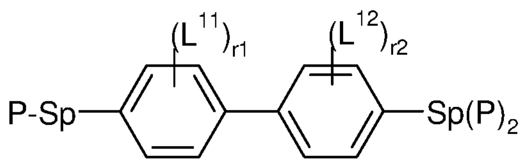

I1C

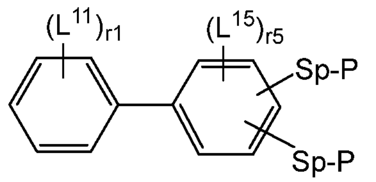

I1D

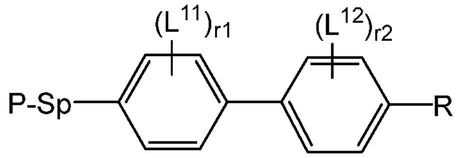

I1E

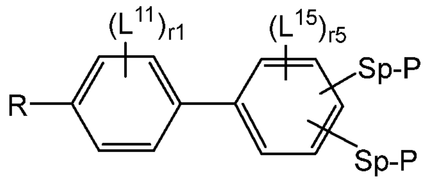

I1F

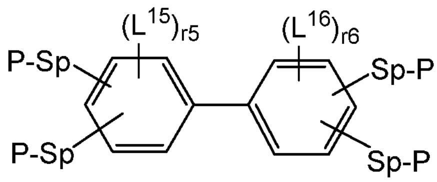

I1G

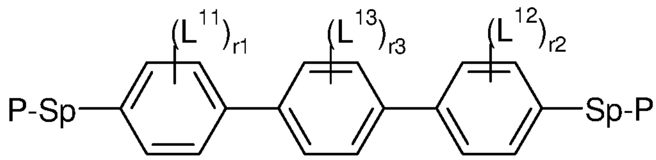

I2A

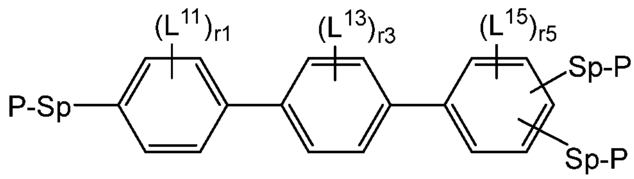

I2B

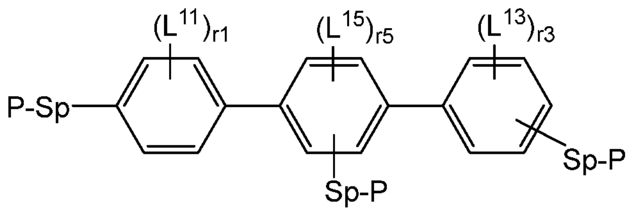

I2C

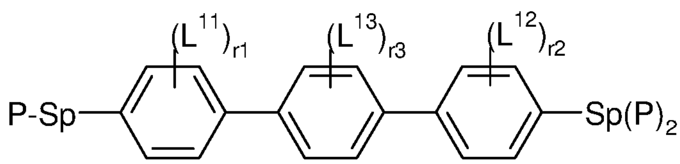

I2D

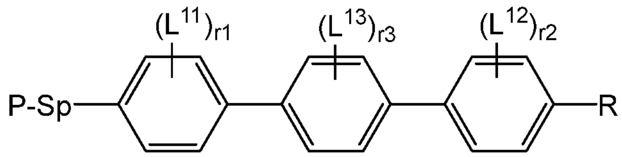

I2E

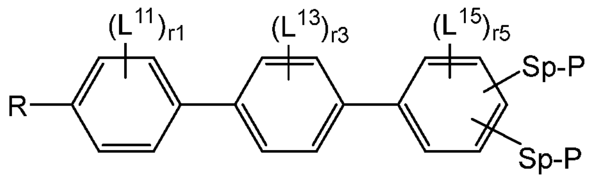

I2F

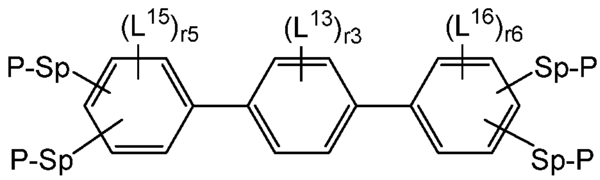

I2G

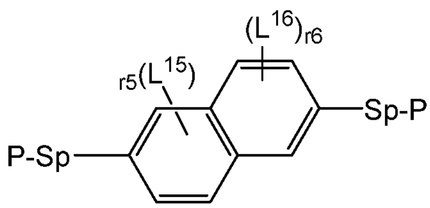

I3A

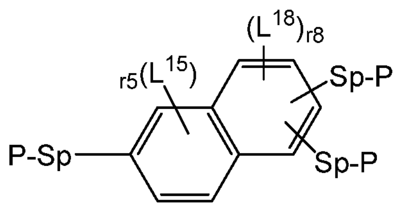

I3B

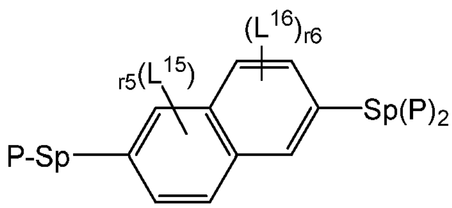

I3C

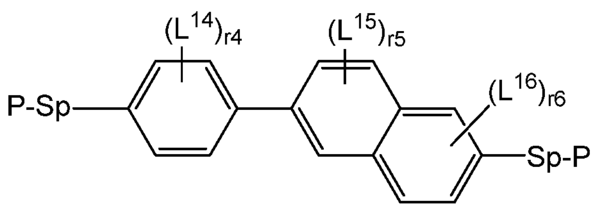

I4A

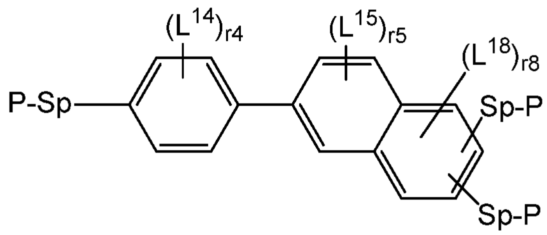

I4B

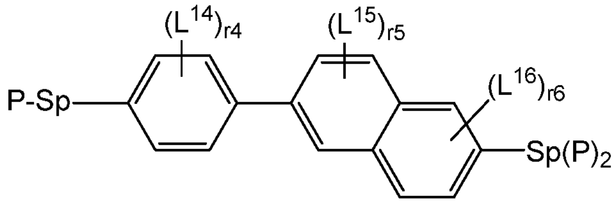

I4C

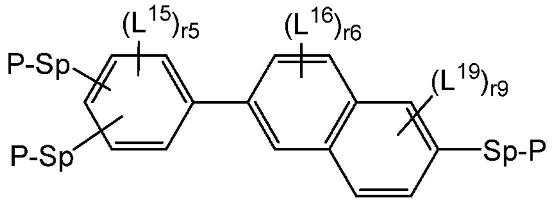

I4D

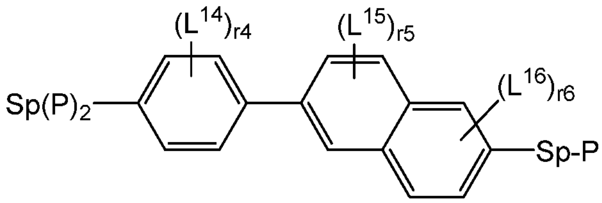

I4E

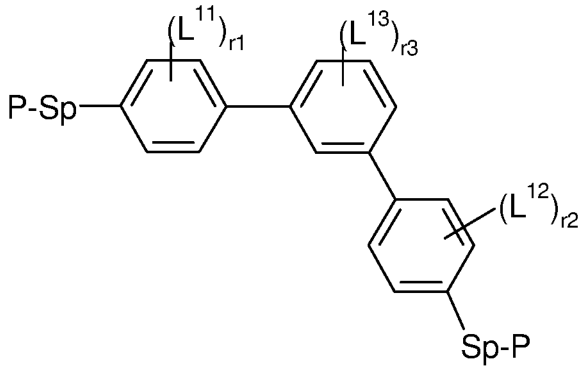

I5A

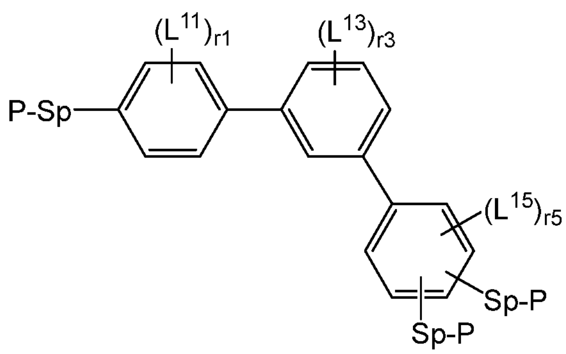

I5B

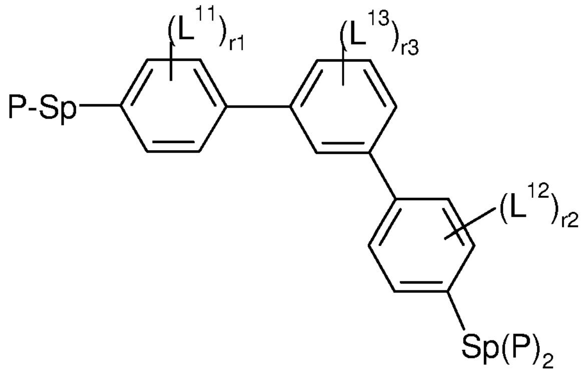

I5C

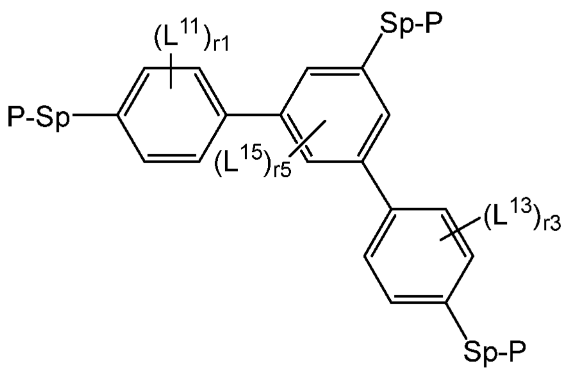

I5D

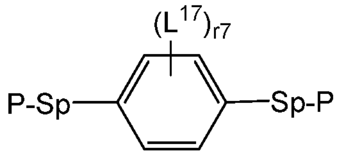

I6A

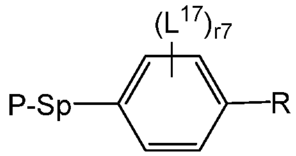

I6B

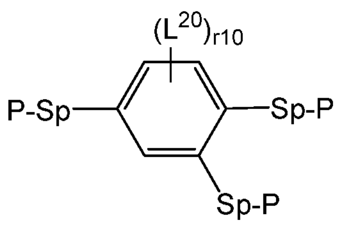

I6C

wherein

R, P, Sp, $L^{11-17}$ and r1-r7 have the meanings given in formula I or one of the preferred meanings as given above and below,
$L^{18}$, $L^{19}$ and $L^{20}$ have one of the meanings given for $L^{11}$,
r8 is 0, 1 or 2, preferably 0 or 1,
r9 is 0, 1, 2 or 3, preferably 0, 1 or 2, very preferably 0 or 1,
r10 is 1, 2 or 3, preferably 1 or 2, very preferably 1,
$Sp(P)_2$ denotes a spacer group Sp that is substituted by two polymerizable groups P at identical or different positions, and
wherein

in formulae I1A, I1C and I1E r1+r2 ≥1,
in formula I1B, I1D and I1F r1+r5 ≥1,
in formula I1G, I3A and I3C r5+r6 ≥1,
in formulae I2A, I2D, I2E, I5A and I5C r1+r2+r3 ≥1,
in formulae I2B, I2C, I2F, I5B and I5D r1+r3+r5 ≥1,
in formula I2G r3+r5+r6 ≥1,
in formula I4A, I4C and I4E r4+r5+r6 ≥1,
in formula I4D r5+r6+r9 ≥1,
in formula I3B r5+r8 ≥1,
in formula I4B r4+r5+r8 ≥1,
and wherein the compounds contain at least group $L^{11}$ to $L^{20}$ that denotes A.

Further preferred compounds of formula I and I12 are selected from the following subformulae

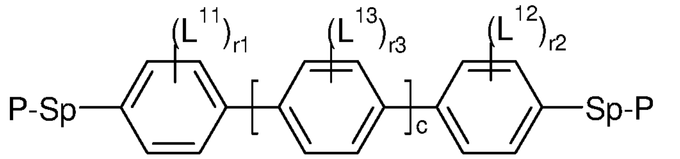

I12A

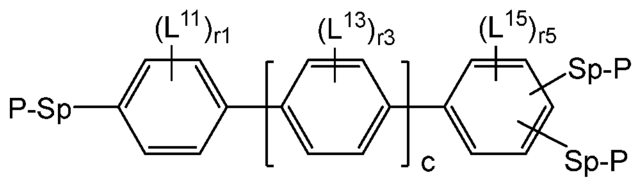

I12B

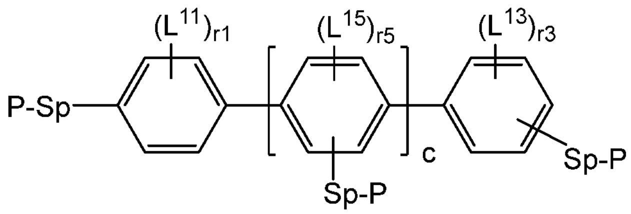

I12C

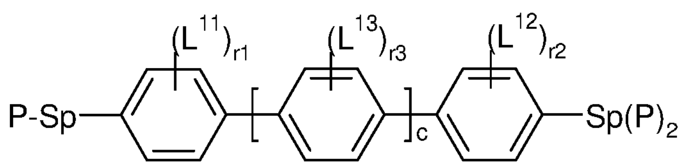

I12D

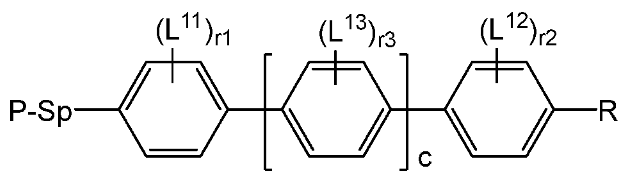

I12E

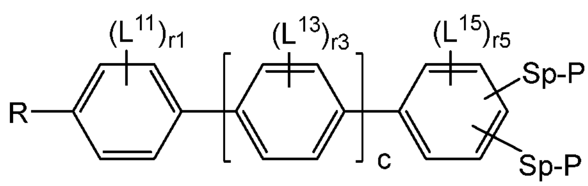

I12F

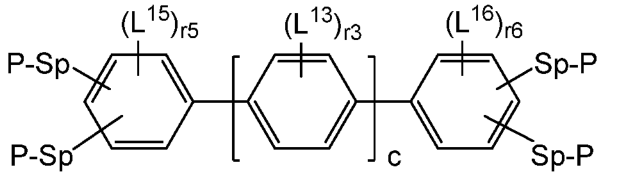

I12G

wherein

R, P, Sp, $Sp(P)_2$, $L^{11-16}$ and r1-r6 have the meanings given in formula I2D or one of the preferred meanings as given above and below,
c is 0, 1 or 2,
in formulae I12A, I12D and I12E r1+r2+r3 ≥1,
in formulae I12B, I12C and I12F r1+r3+r5 ≥1,
in formula I12G r3+r5+r6 ≥1,
and the compounds contain at least one group $L^{11}$ to $L^{16}$ that is A.

Preferably, in the componds of formulae I12A to I12G, if c is 0 then one of r1 and r2 is 0, and if c is 1 or 2 then at least one of r1, r2 and r3 is 0.

Very preferred are compounds of formula I12A.

Further preferred compounds of formulae !, !1 to I6, I12, I1A-I6C and I12A-I12G are selected from the following subformulae:

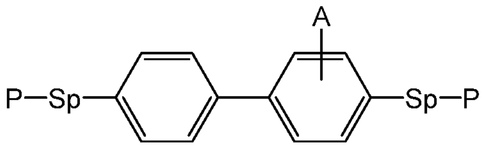

I1A-1

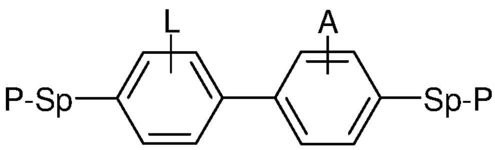

I1A-2

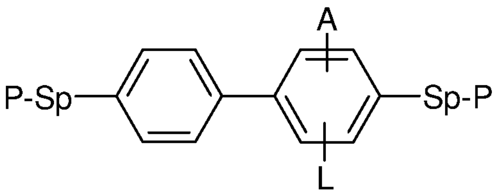

I1A-3

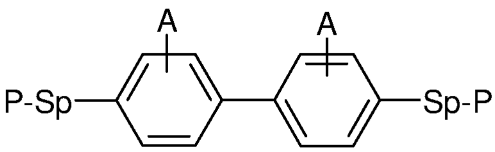

I1A-4

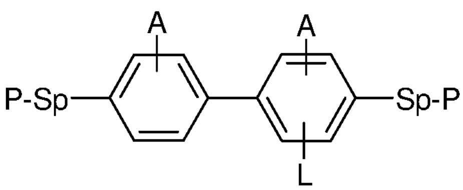

I1A-5

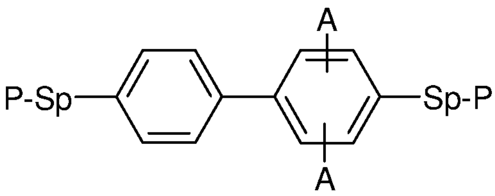

I1A-6

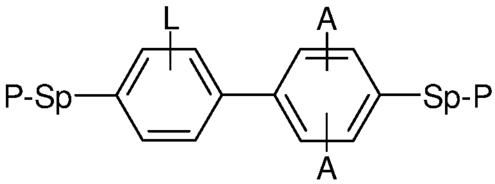

I1A-7

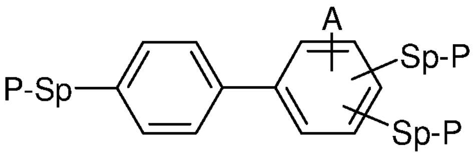

I1B-1

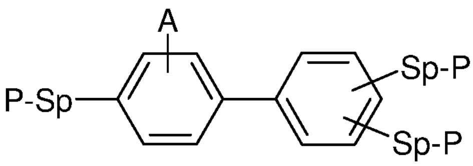

I1B-2

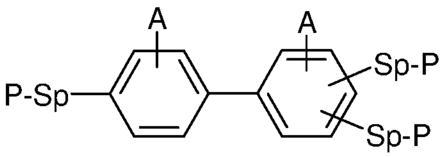

I1B-3

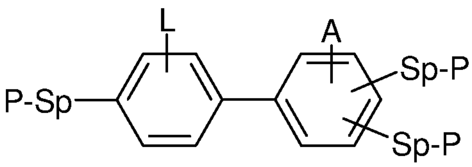

I1B-4

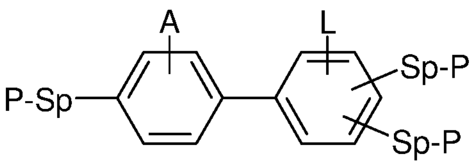

I1B-5

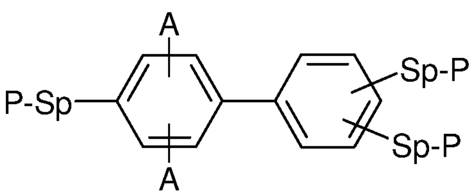

I1B-6

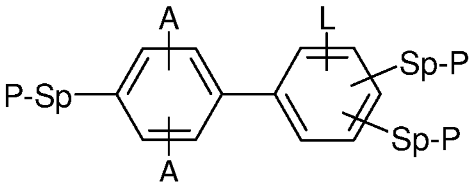

I1B-7

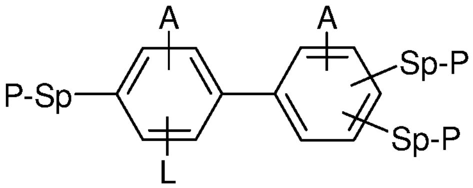

I1B-8

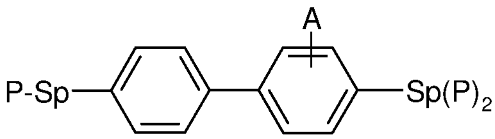

I1C-1

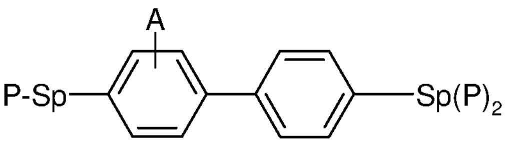

I1C-2

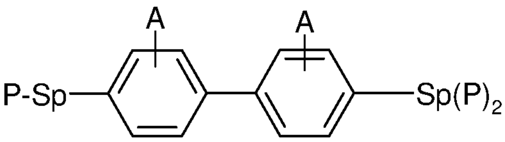

I1C-3

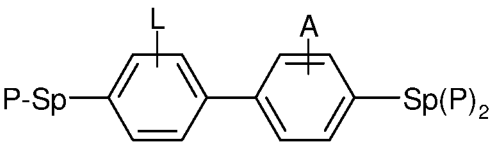

I1C-4

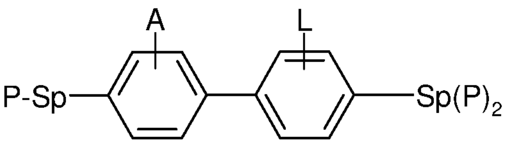

I1C-5

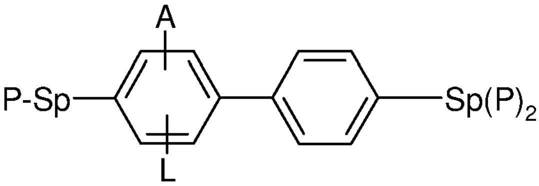

I1C-6

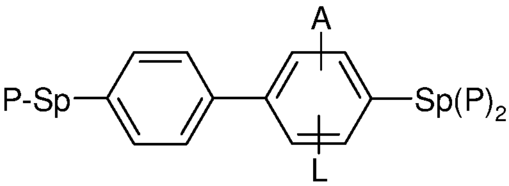

I1C-7

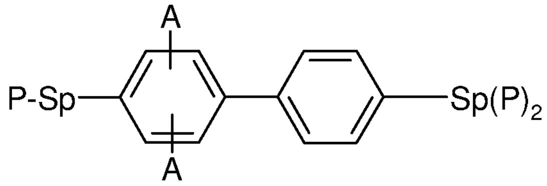

I1C-8

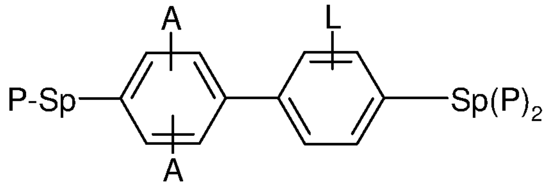

I1C-9

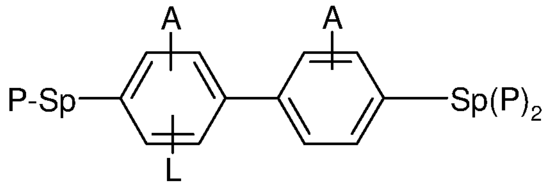

I1C-10

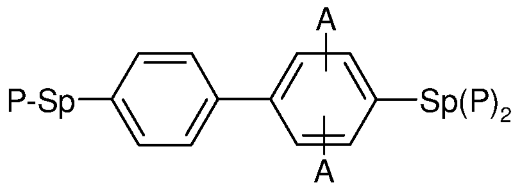

I1C-11

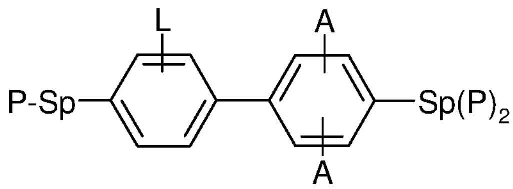

I1C-12

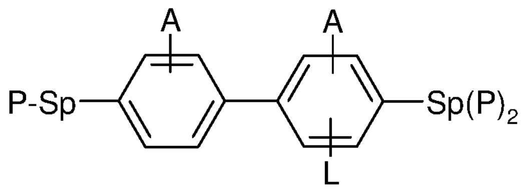

I1C-13

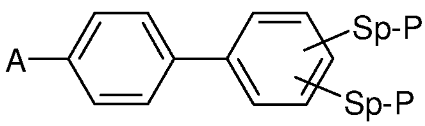

I1D-1

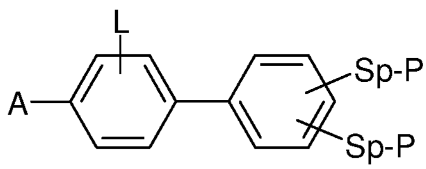

I1D-2

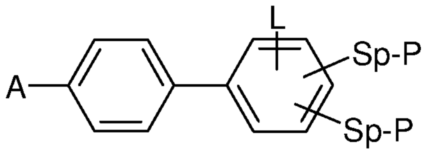

I1D-3

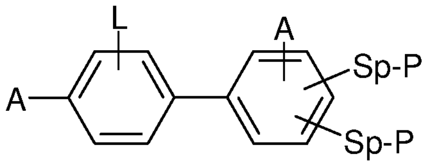

I1D-4

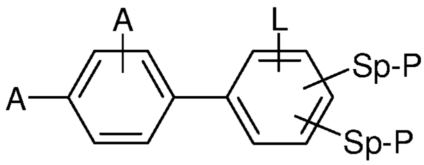

I1D-5

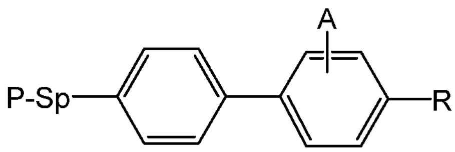

I1E-1

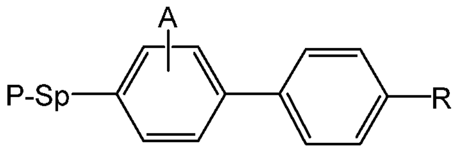

I1E-2

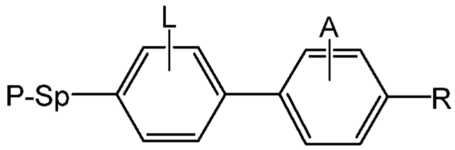

I1E-3

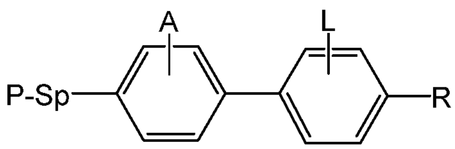

I1E-4

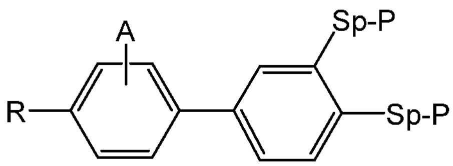

I1F-1

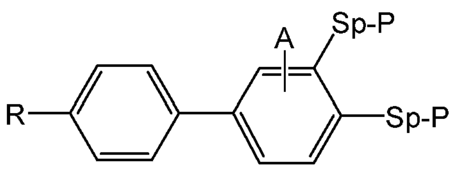

I1F-2

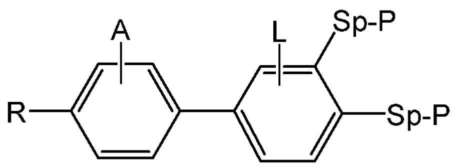

I1F-3

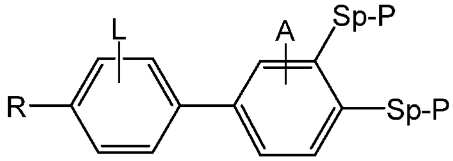

I1F-4

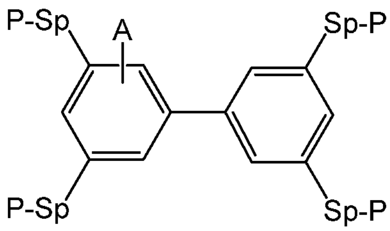

I1G-1

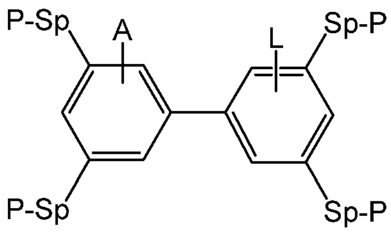

I1G-2

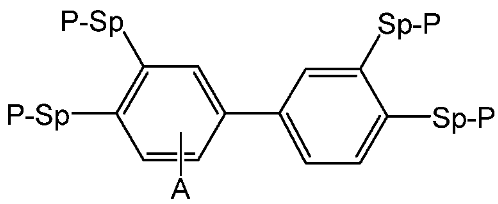

I1G-3

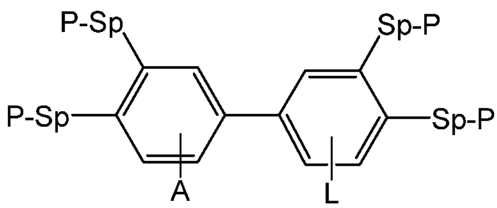

I1G-4

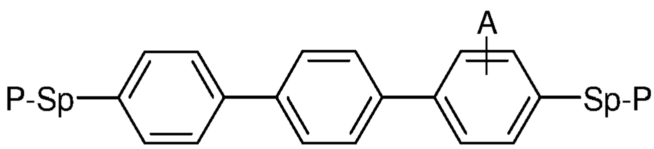

I2A-1

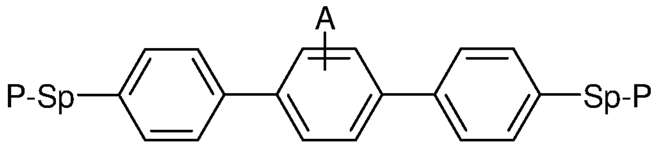

I2A-2

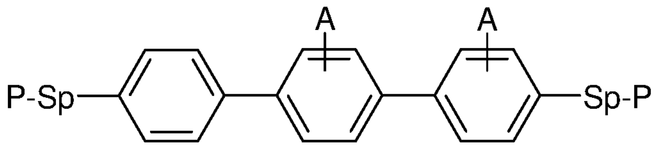

I2A-3

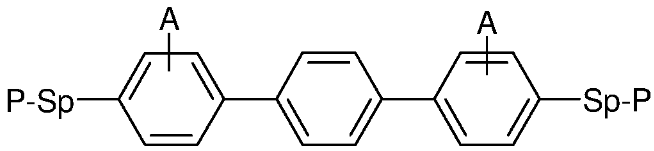

I2A-4

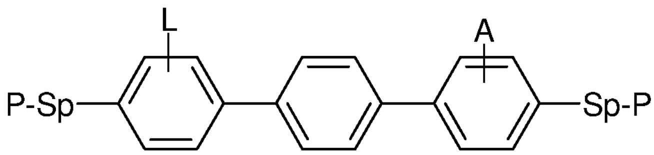

I2A-5

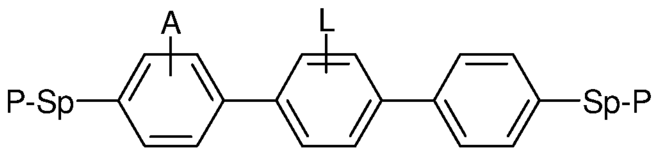

I2A-6

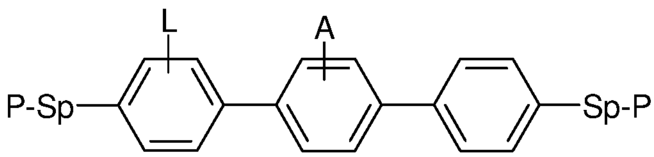

I2A-7

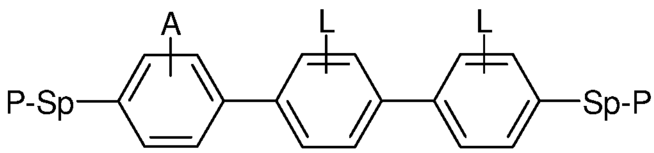

I2A-8

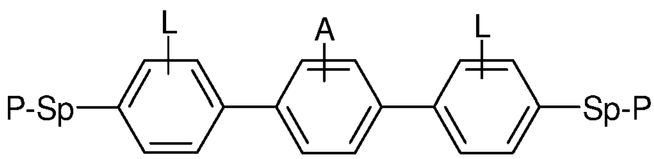

I2A-9

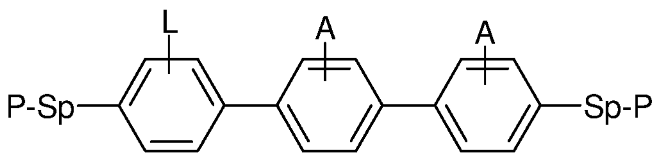

I2A-10

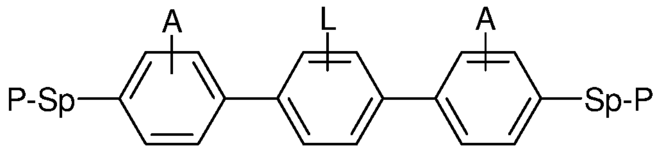

I2A-11

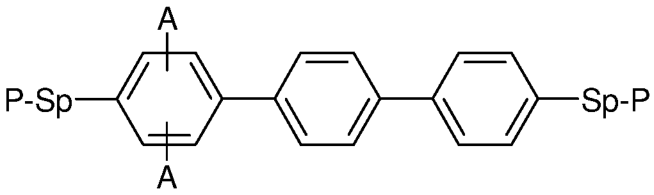

I2A-12

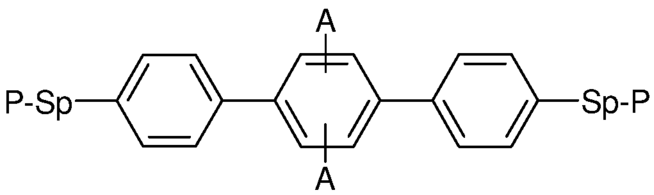

I2A-13

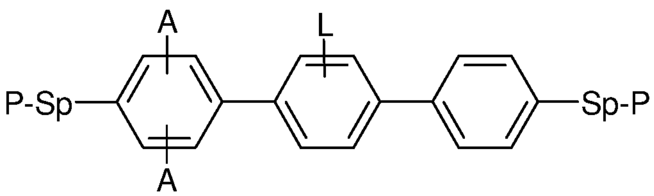

I2A-14

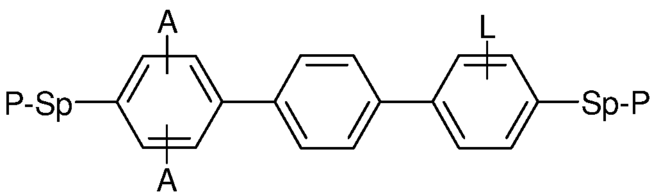

I2A-15

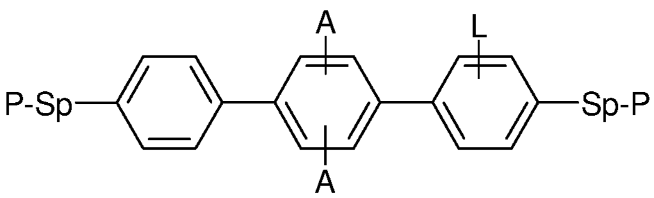

I2A-16

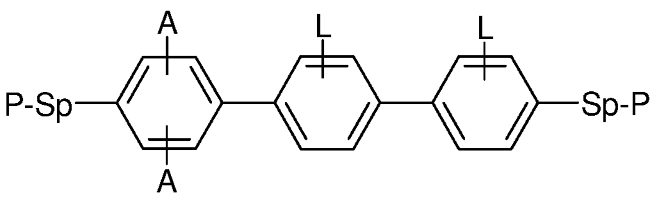

I2A-17

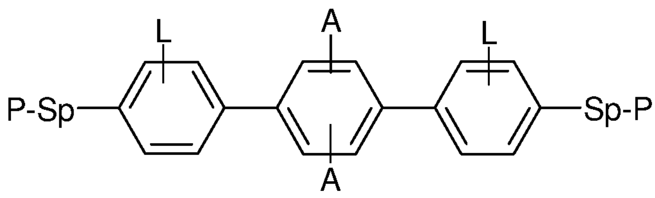

I2A-18

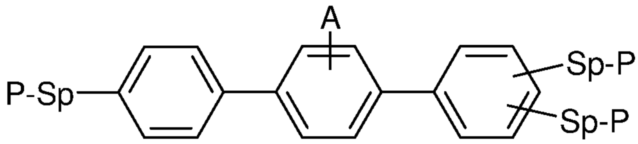

I2B-1

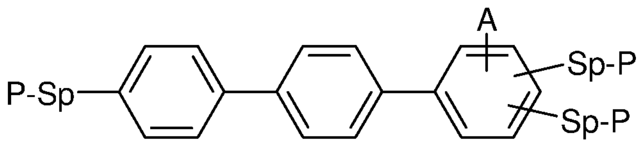

I2B-2

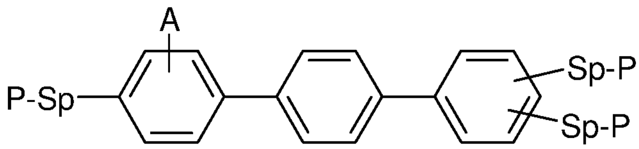

I2B-3

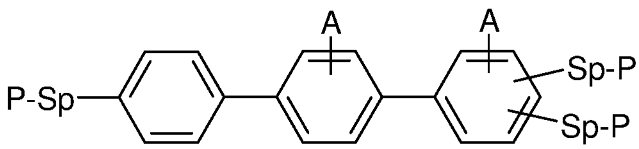

I2B-4

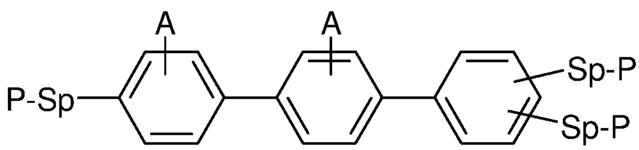

I2B-5

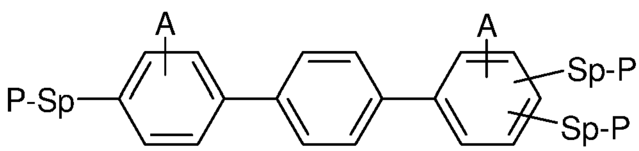

I2B-6

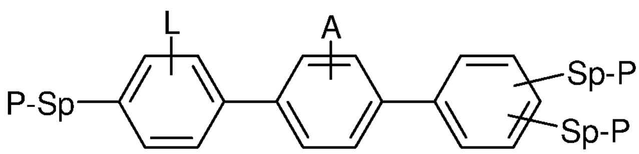

I2B-7

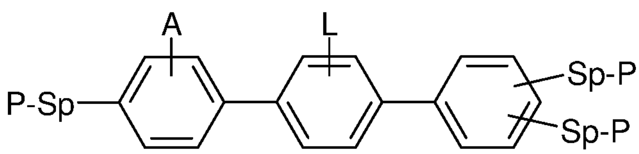

I2B-8

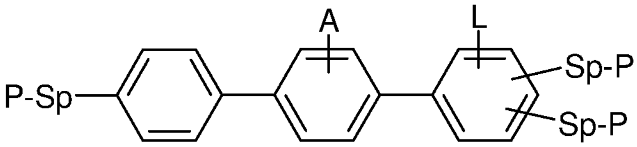

I2B-9

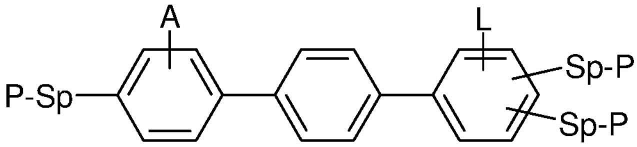

I2B-10

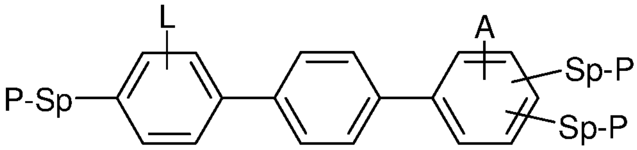

I2B-11

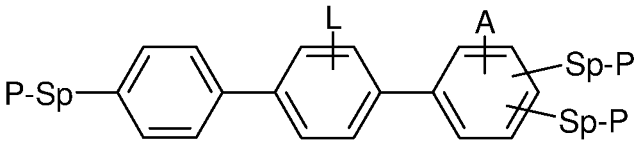

I2B-12

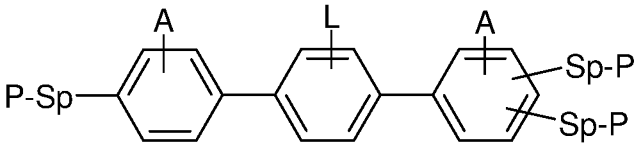

I2B-13

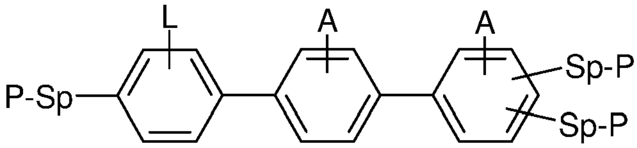

I2B-14

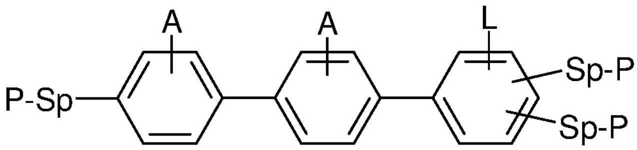

I2B-15

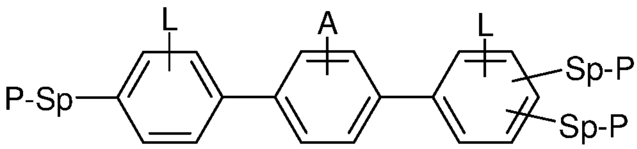

I2B-16

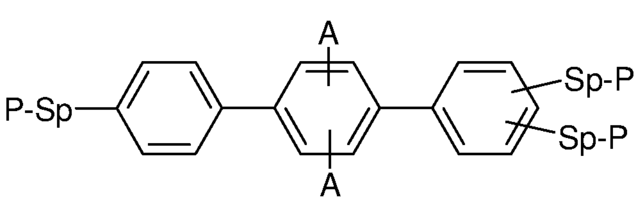

I2B-16

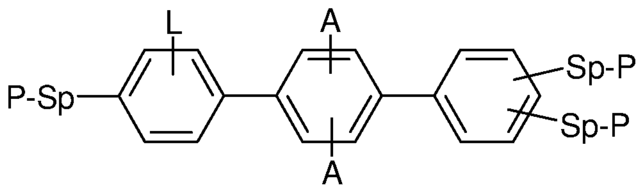

I2B-17

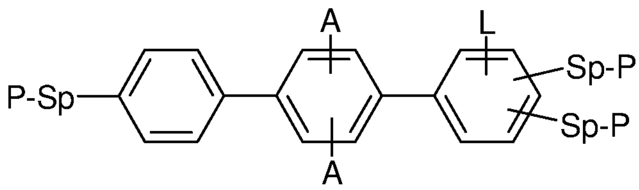

I2B-18

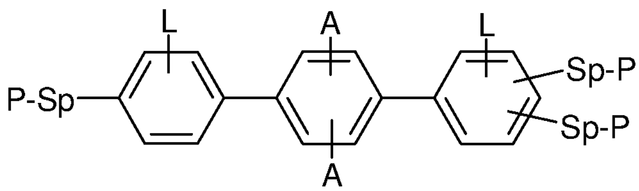

I2B-19

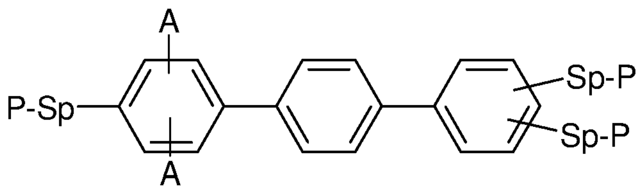

I2B-20

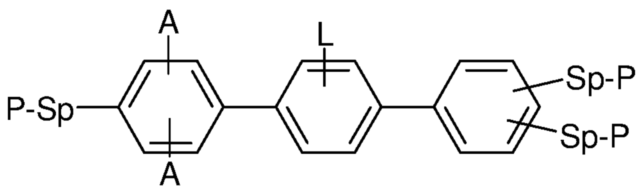

I2B-21

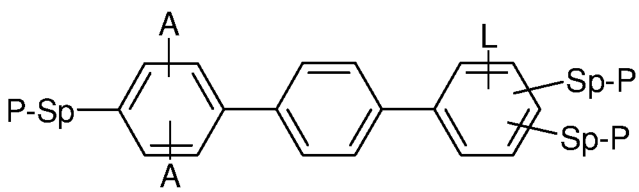

I2B-22

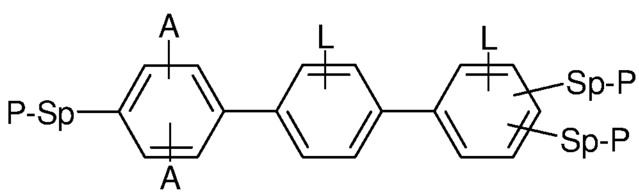

I2B-23

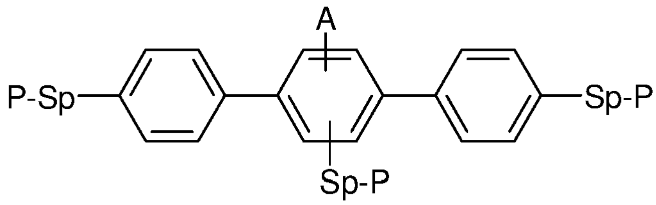

I2C-1

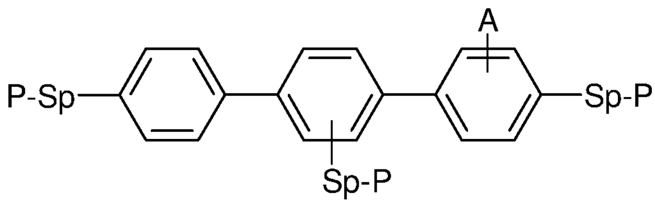

I2C-2

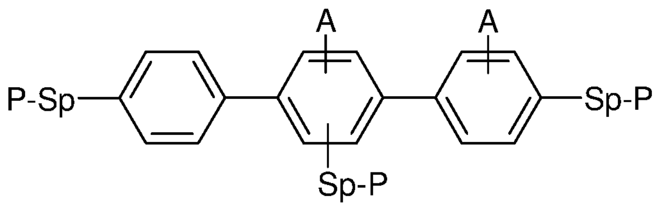

I2C-3

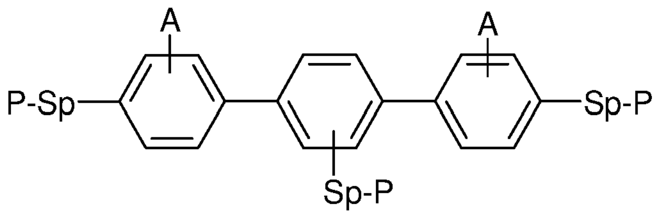

I2C-4

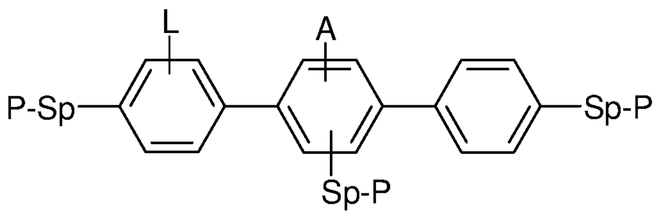

I2C-5

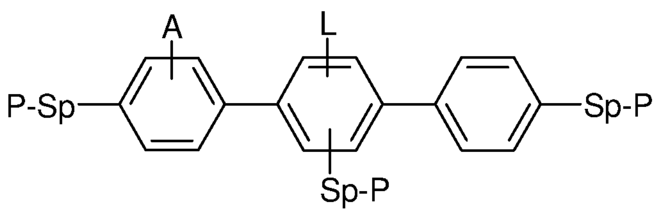

I2C-6

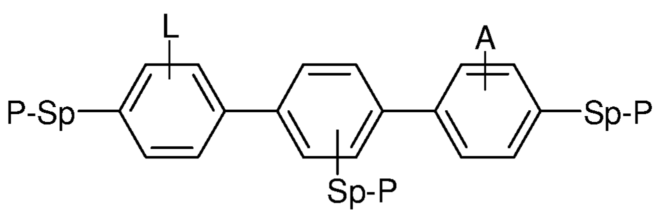

I2C-7

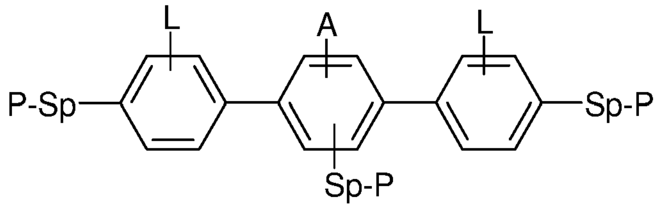

I2C-8

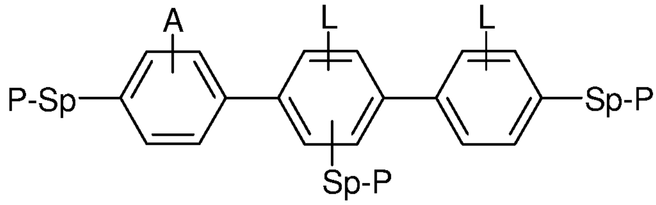

I2C-9

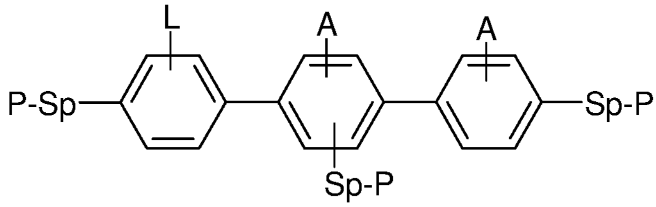

I2C-10

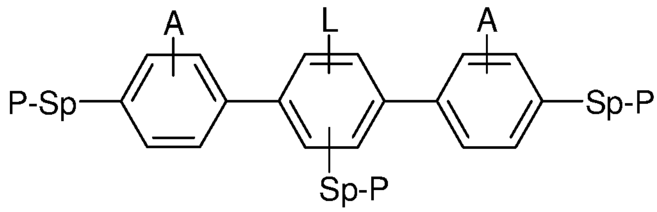

I2C-11

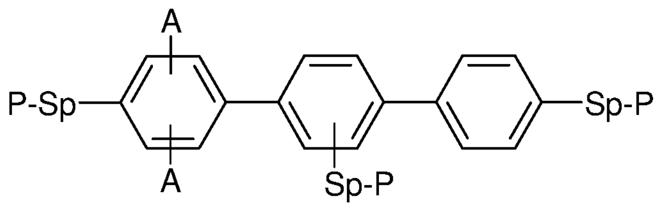

I2C-12

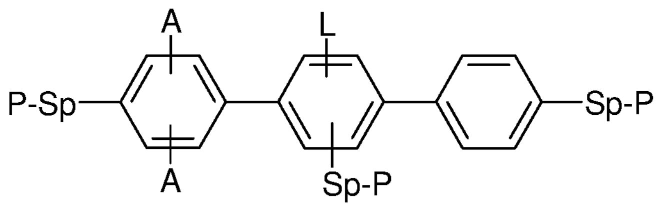

I2C-13

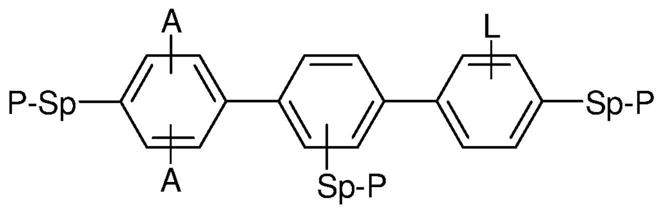

I2C-14

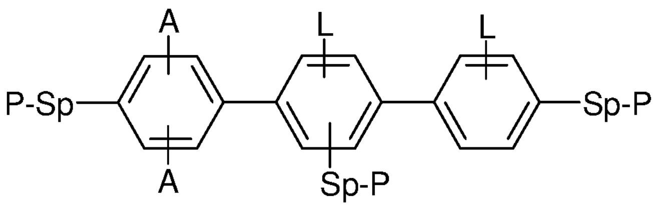

I2C-15

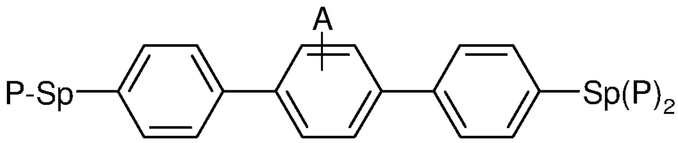

I2D-1

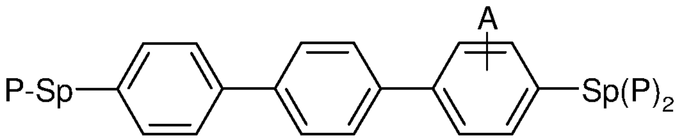

I2D-2

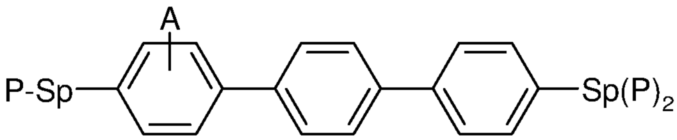

I2D-3

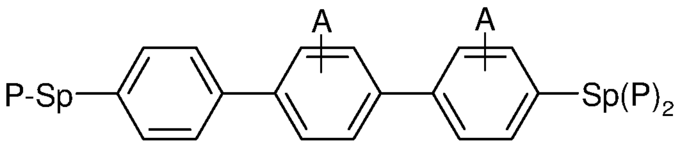

I2D-4

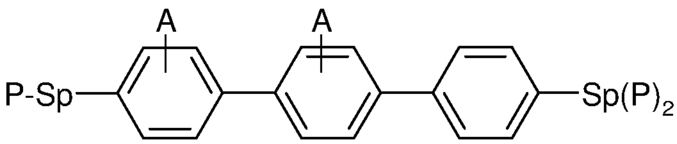

I2D-5

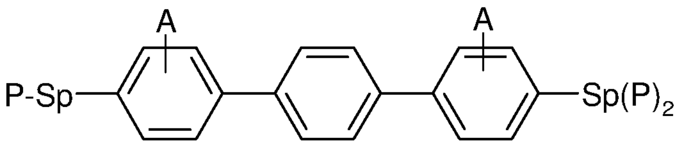

I2D-6

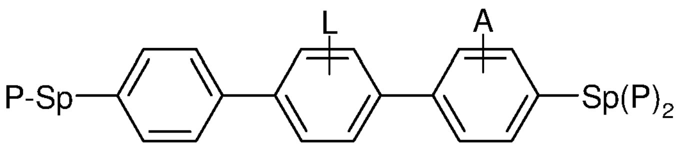

I2D-7

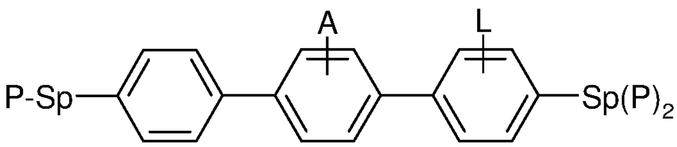

I2D-8

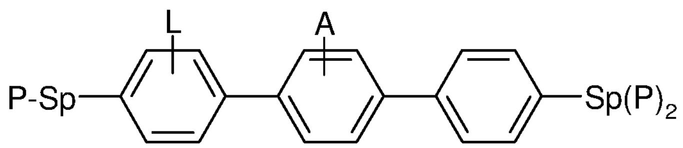

I2D-9

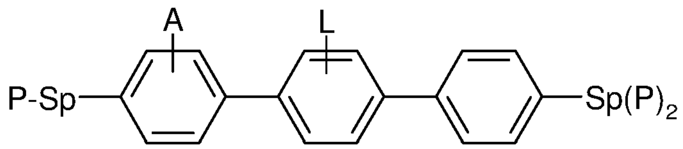

I2D-10

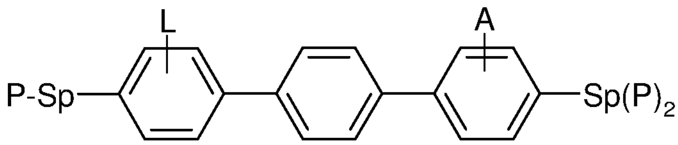

I2D-11

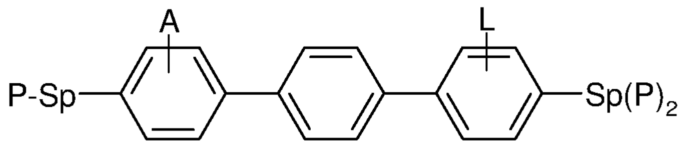

I2D-12

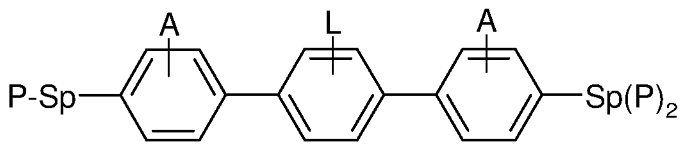

I2D-13

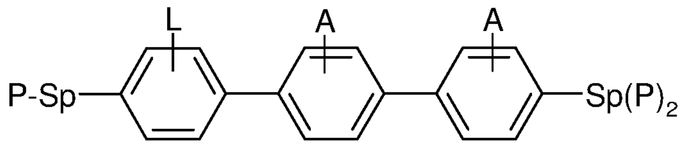

I2D-14

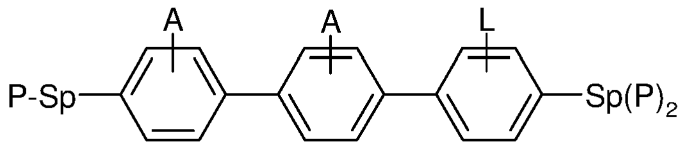

I2D-15

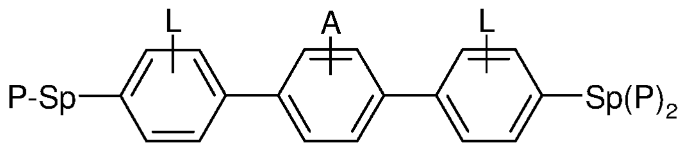

I2D-16

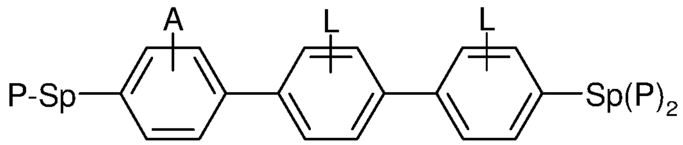

I2D-17

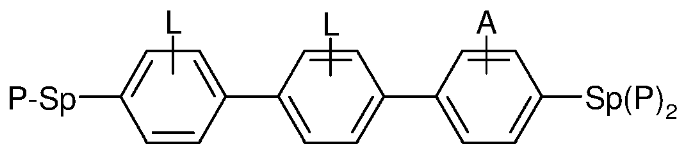

I2D-18

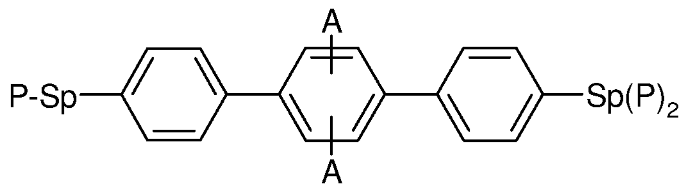

I2D-19

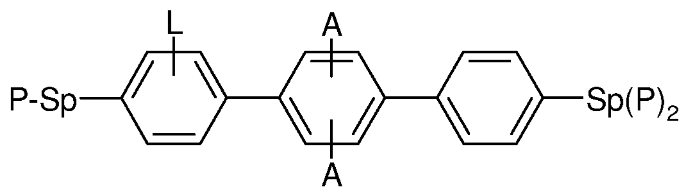

I2D-20

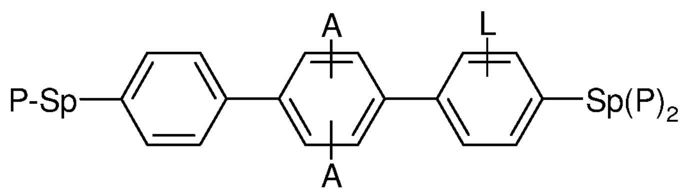

I2D-21

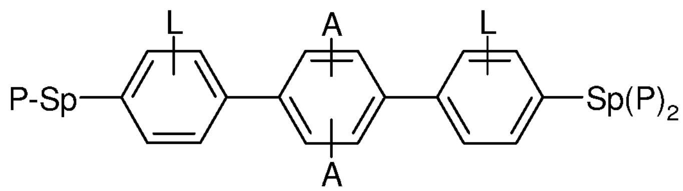

I2D-22

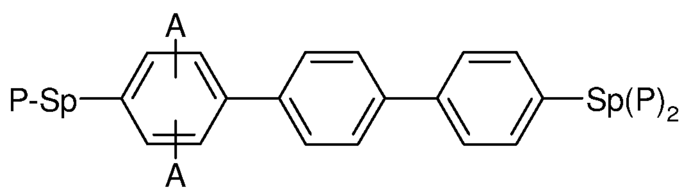

I2D-23

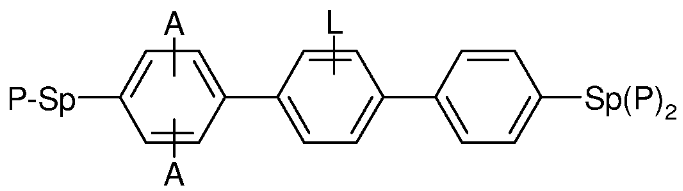

I2D-24

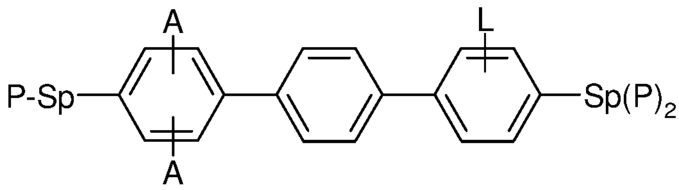

I2D-25

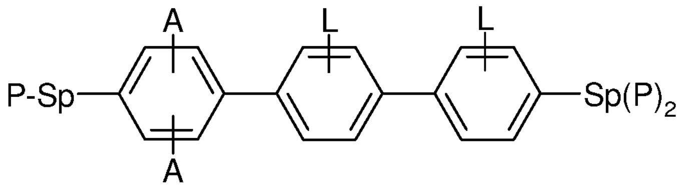

I2D-26

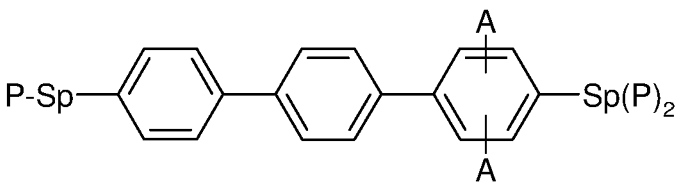

I2D-27

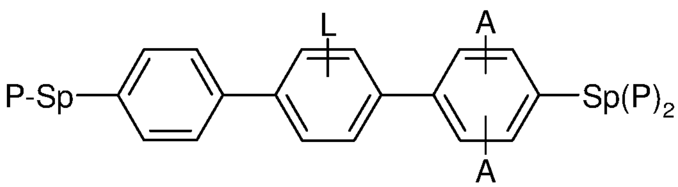

I2D-28

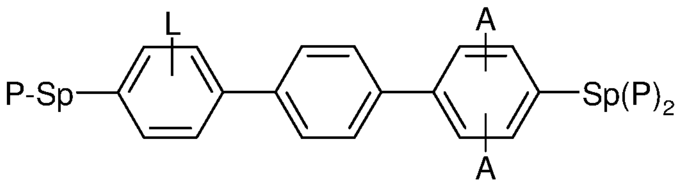

I2D-29

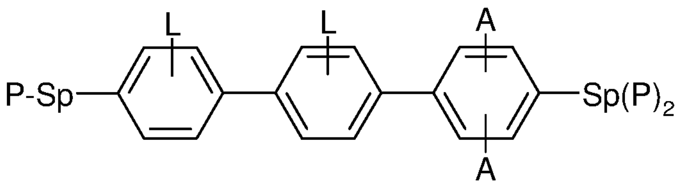

I2D-30

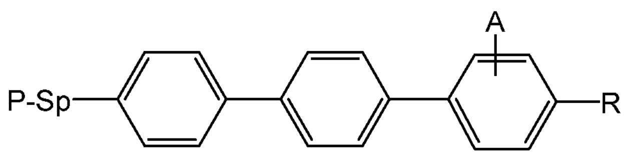

I2E-1

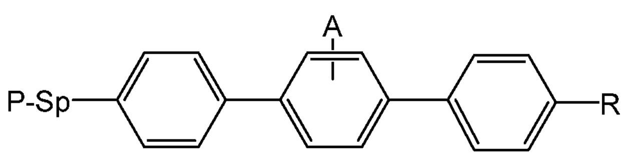

I2E-2

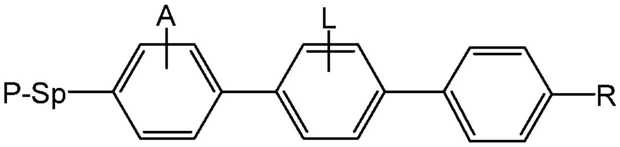

I2E-3

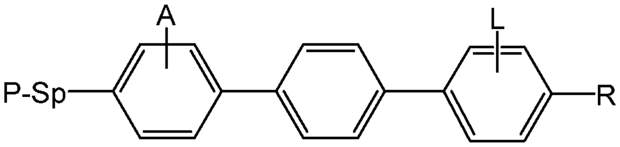

I2E-4

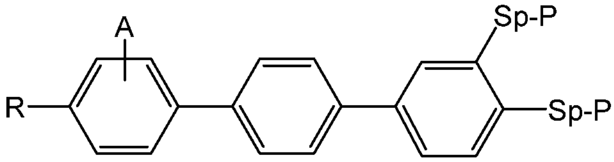

I2F-1

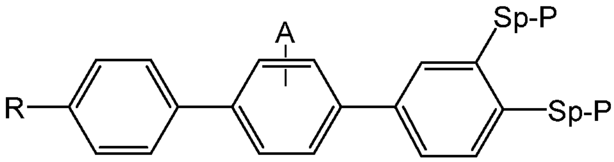

I2F-2

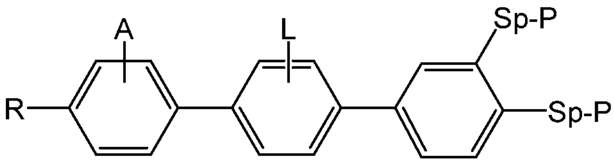

I2F-3

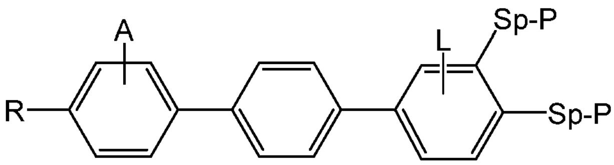

I2F-4

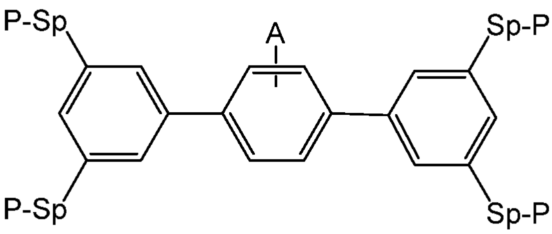

I2G-1

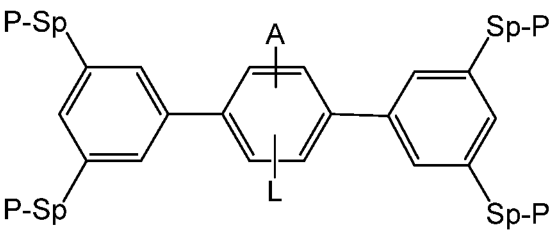

I2G-2

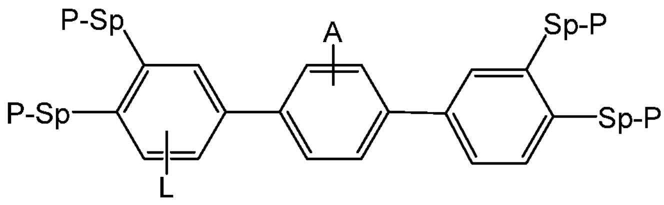

I2G-3

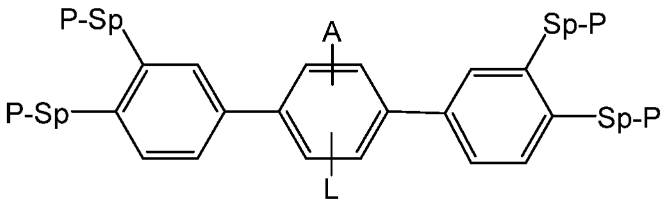

I2G-4

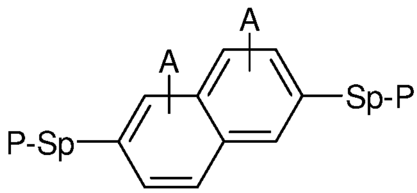

I3A-1

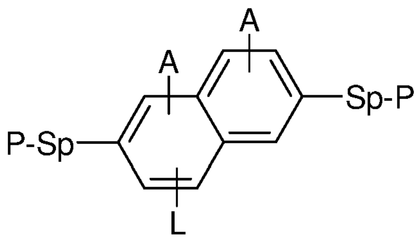

I3A-2

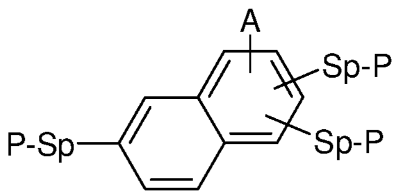

I3B-1

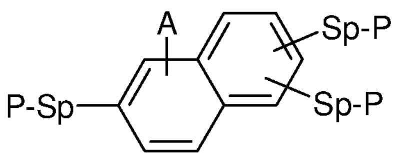

I3B-2

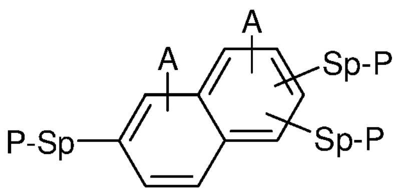

I3B-3

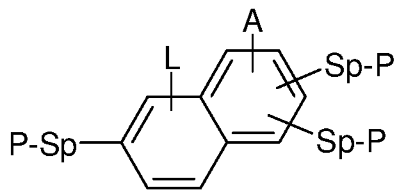

I3B-4

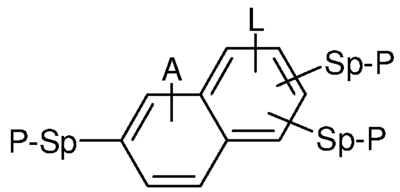

I3B-5

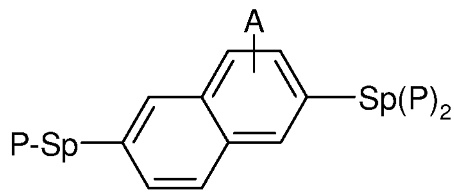

I3C-1

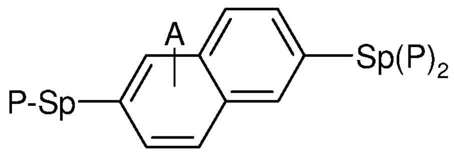

I3C-2

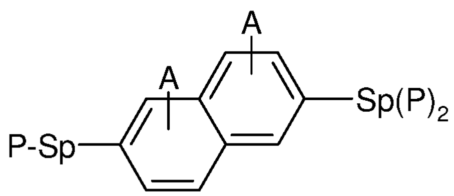

I3C-3

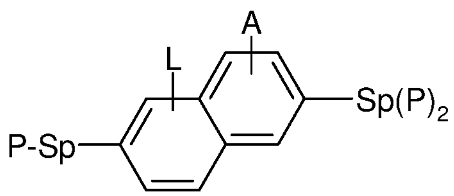

I3C-4

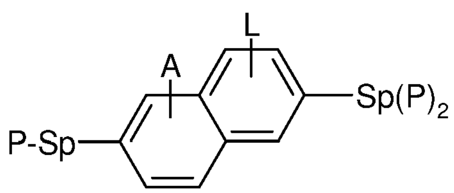

I3C-5

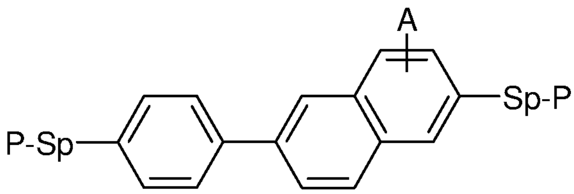

I4A-1

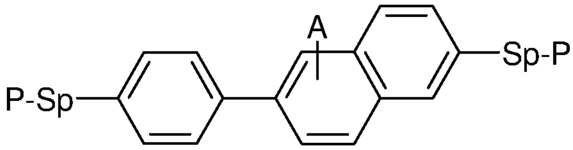

I4A-2

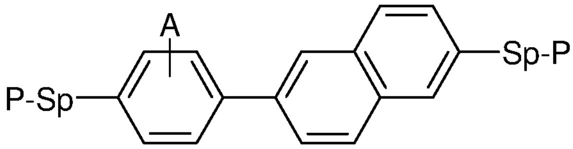

I4A-3

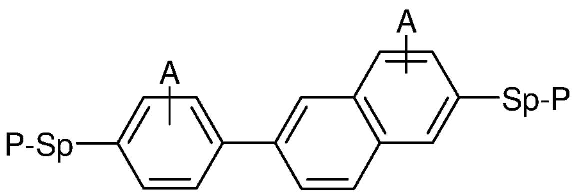

I4A-4

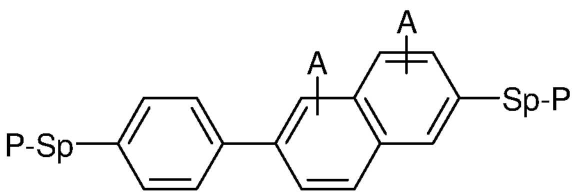

I4A-5

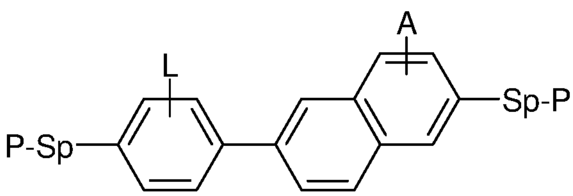

I4A-6

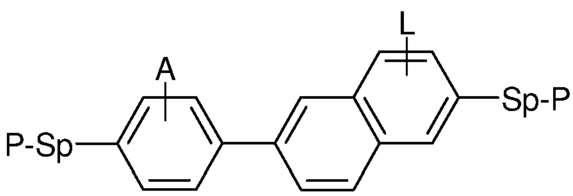

I4A-7

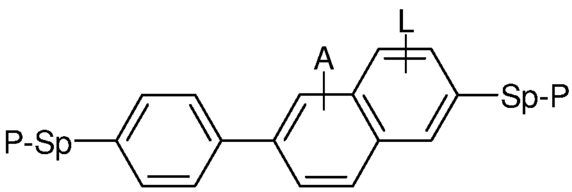

I4A-8

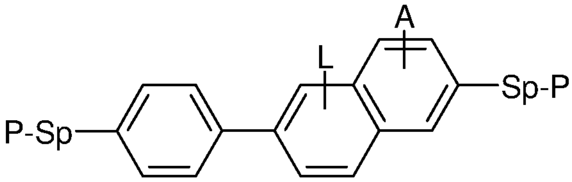

I4A-9

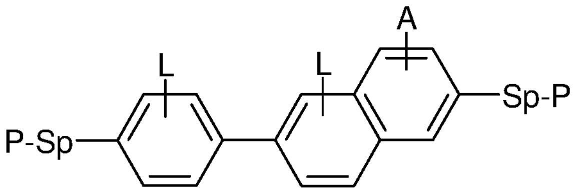

I4A-10

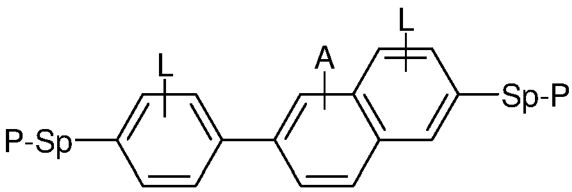

I4A-11

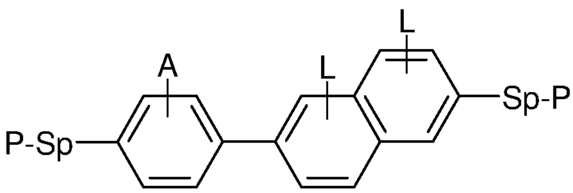

I4A-12

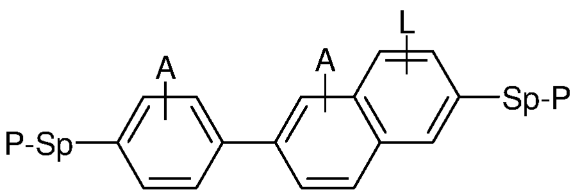

I4A-13

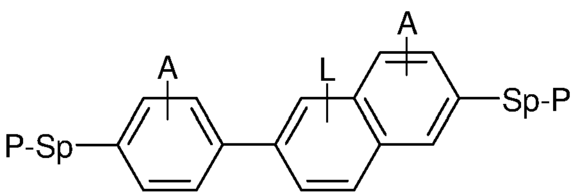

I4A-14

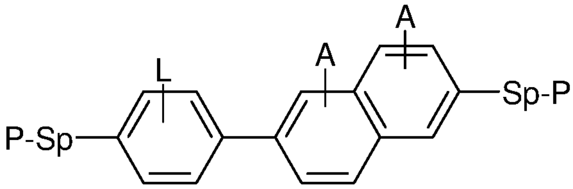

I4A-15

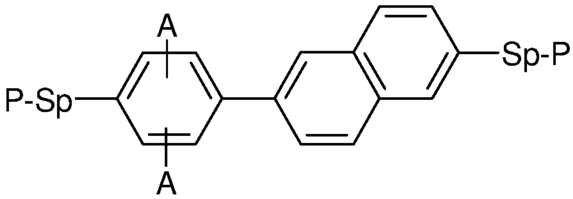

I4A-16

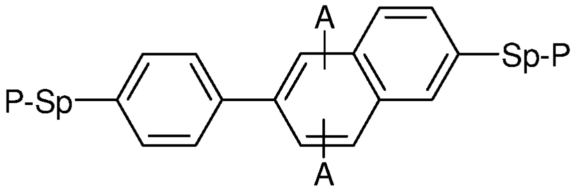

I4A-17

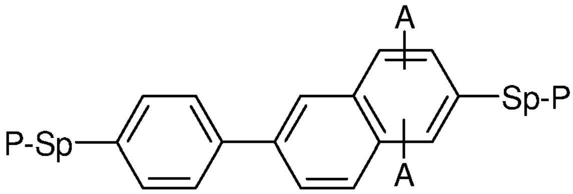

I4A-18

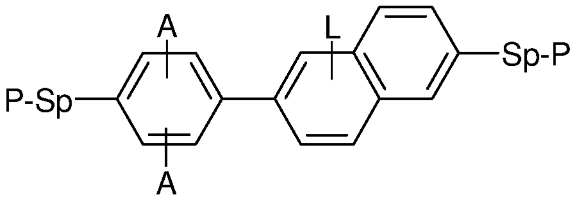

I4A-19

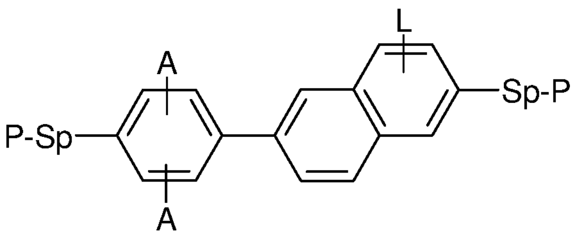

I4A-20

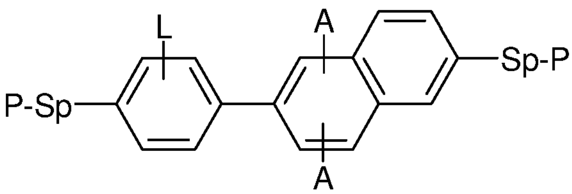

I4A-21

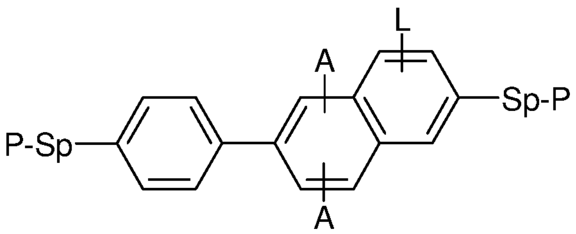

I4A-22

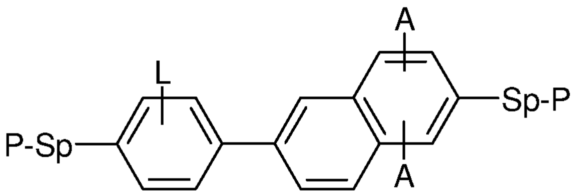

I4A-23

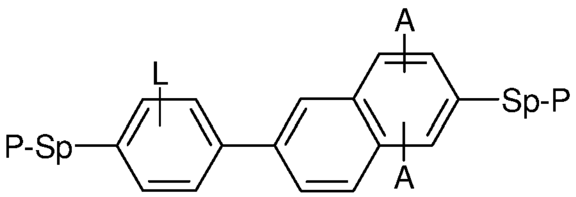

I4A-24

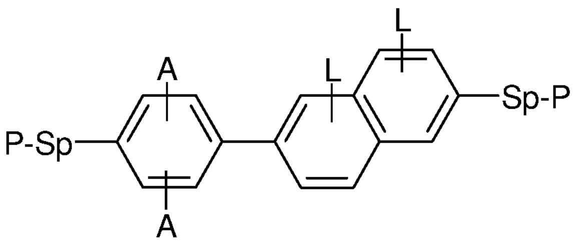

I4A-25

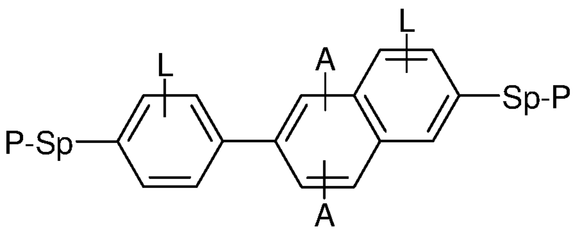

I4A-26

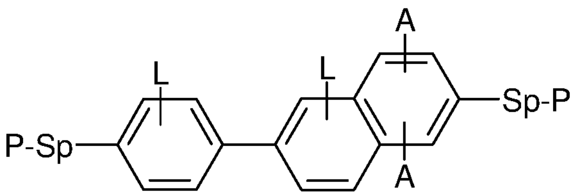

I4A-27

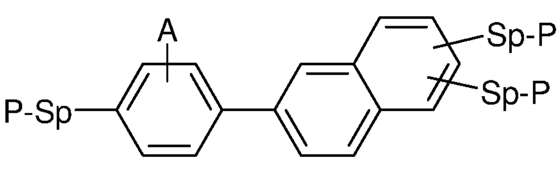

I4B-1

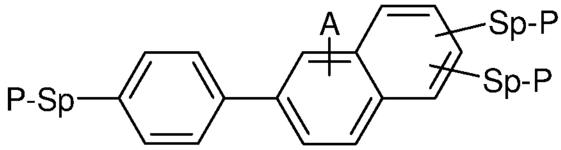

I4B-2

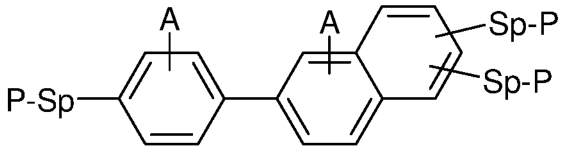

I4B-3

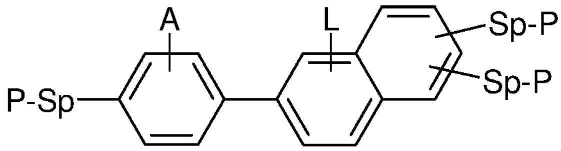

I4B-4

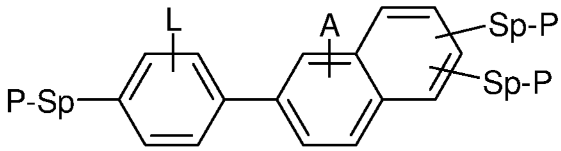

I4B-5

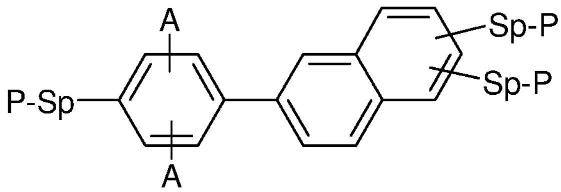

I4B-6

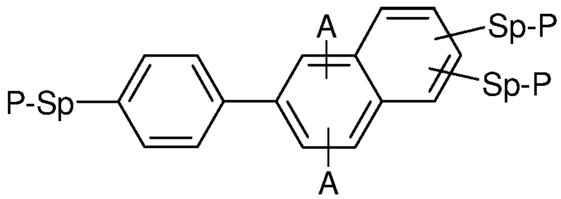

I4B-7

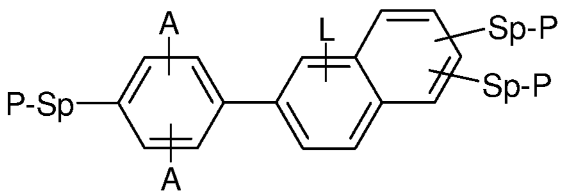

I4B-8

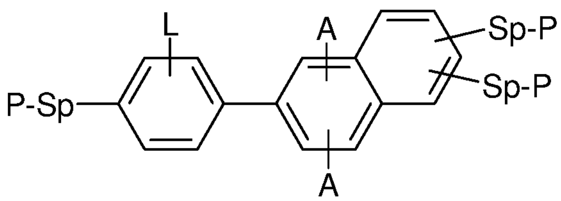

I4B-9

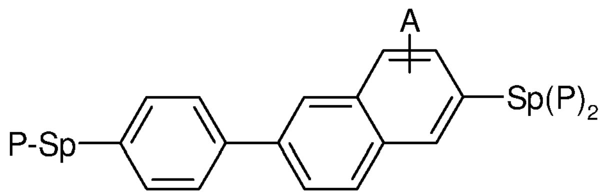

I4C-1

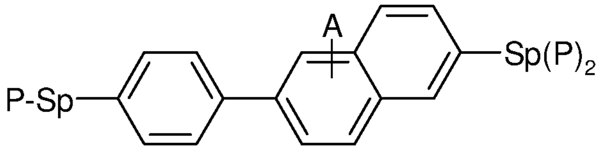

I4C-2

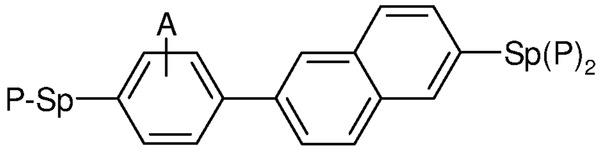

I4C-3

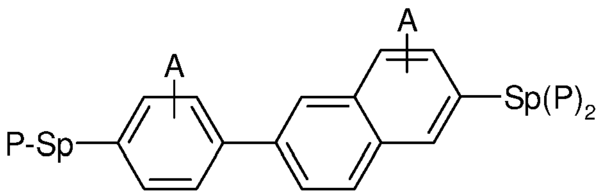

I4C-4

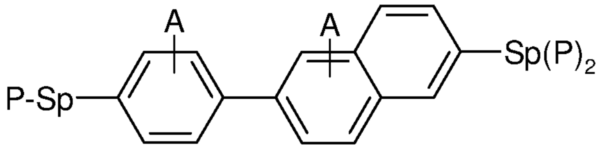

I4C-5

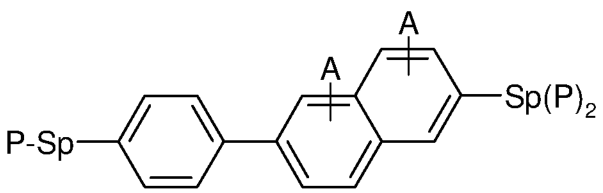

I4C-6

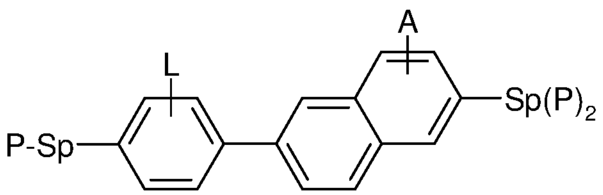

I4C-7

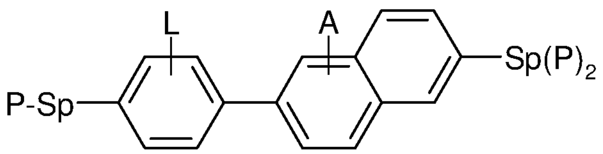

I4C-8

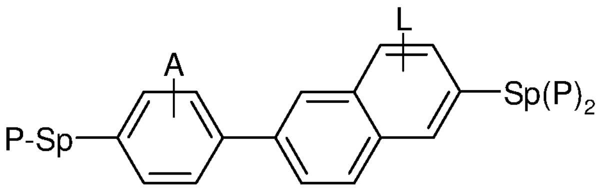

I4C-9

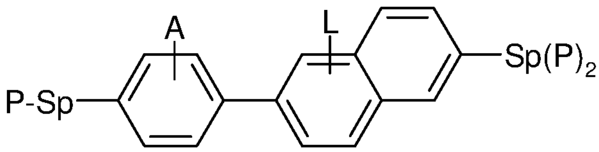

I4C-10

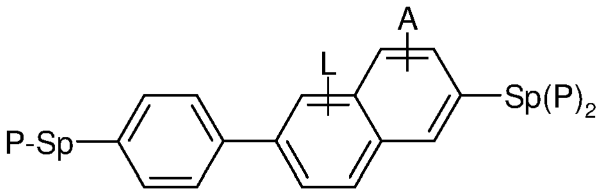

I4C-11

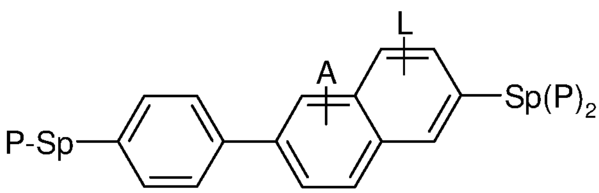

I4C-12

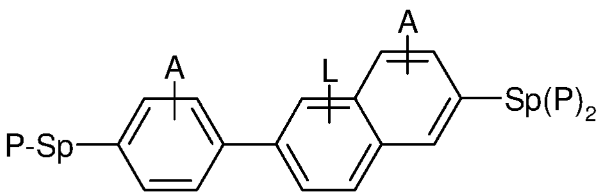

I4C-13

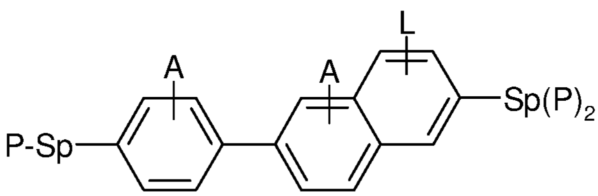

I4C-14

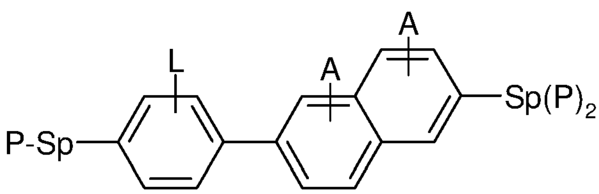

I4C-15

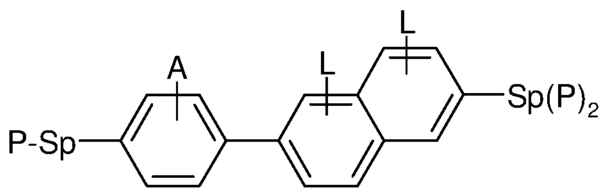

I4C-16

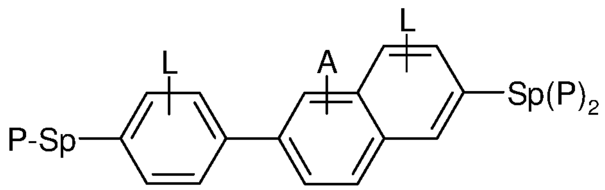

I4C-17

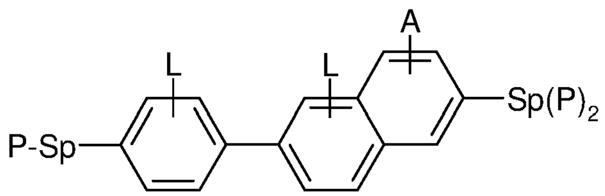

I4C-18

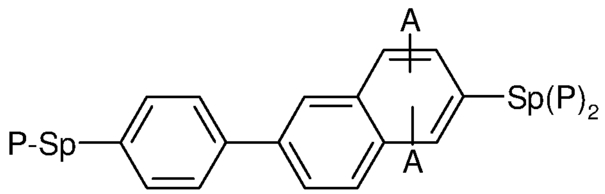

I4C-19

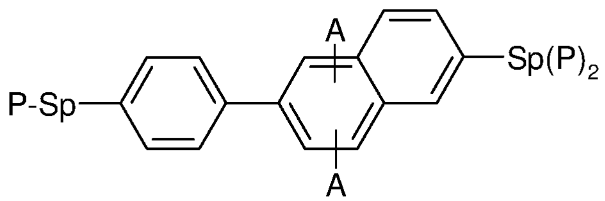

I4C-20

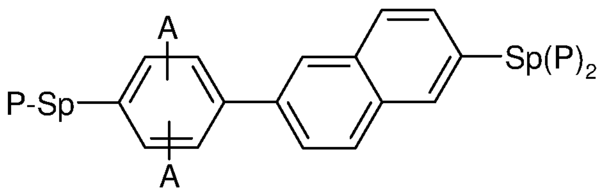

I4C-21

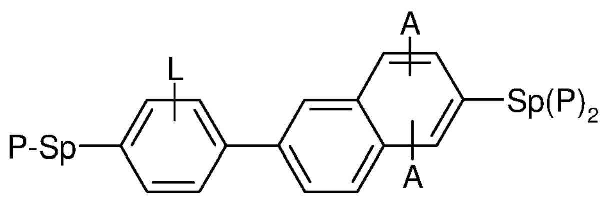

I4C-22

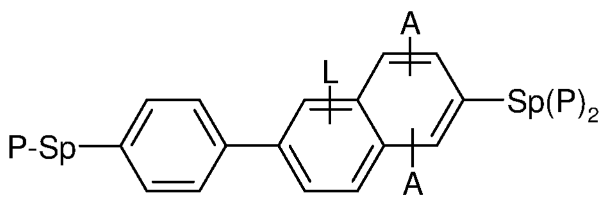

I4C-23

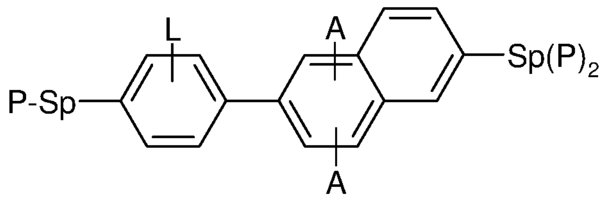

I4C-24

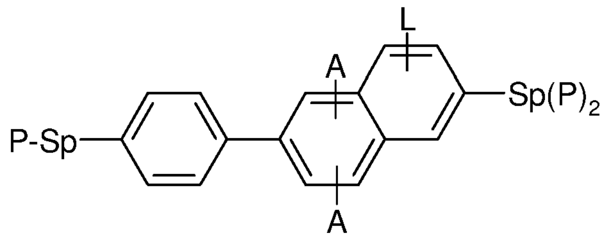

I4C-25

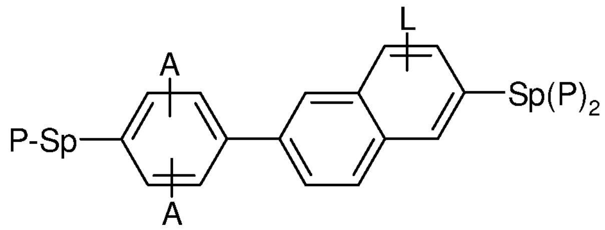

I4C-26

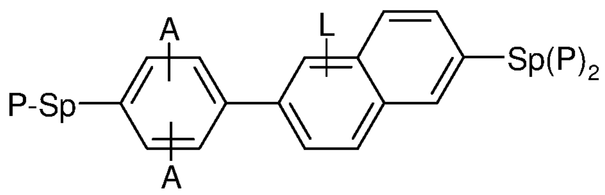

I4C-27

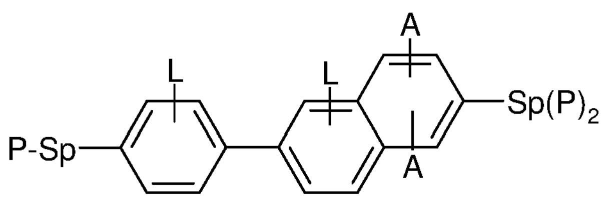

I4C-28

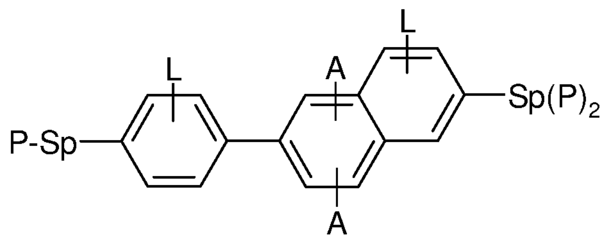

I4C-29

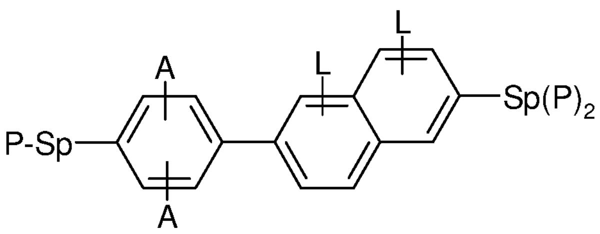

I4C-30

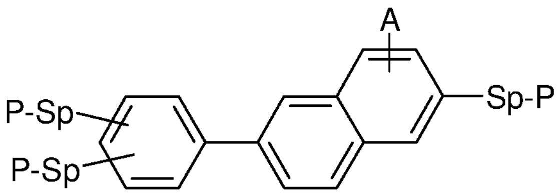

I4D-1

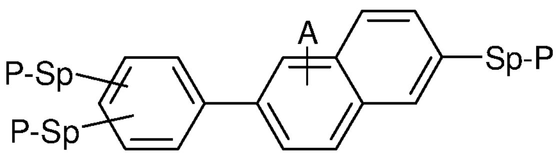

I4D-2

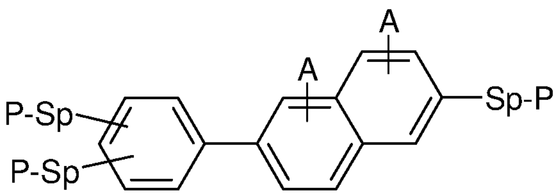

I4D-3

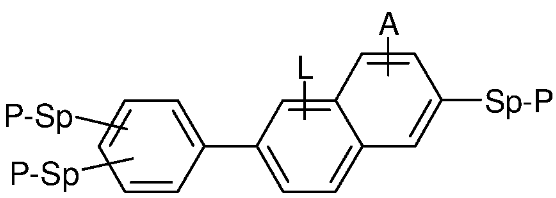

I4D-4

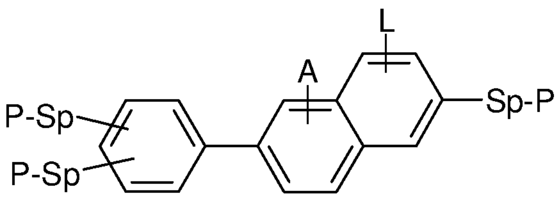

I4D-5

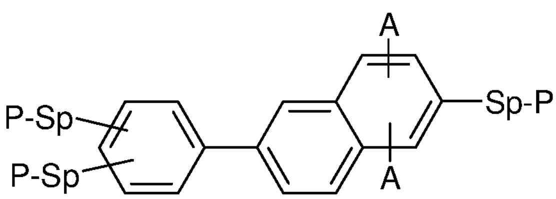

I4D-6

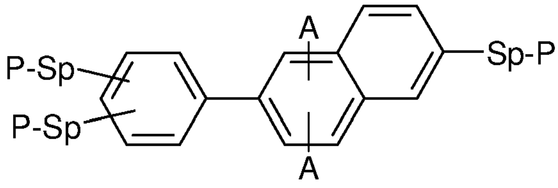
I4D-7

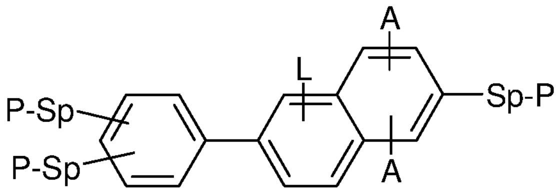
I4D-8

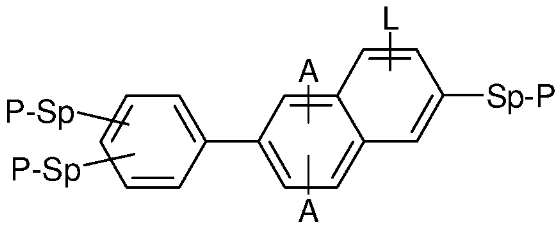
I4D-9

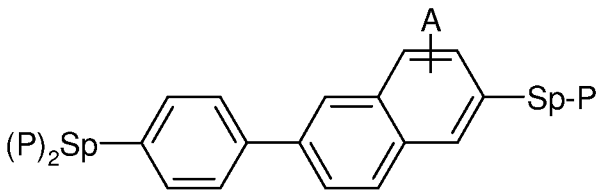
I4E-1

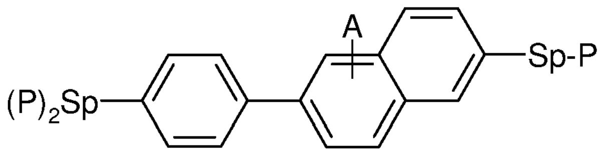
I4E-2

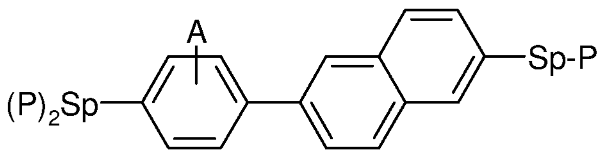
I4E-3

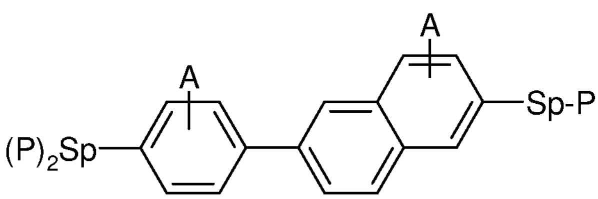
I4E-4

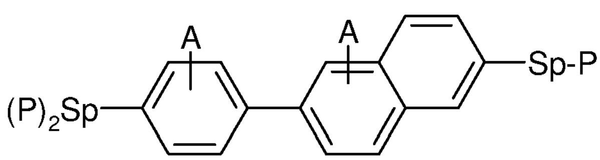
I4E-5

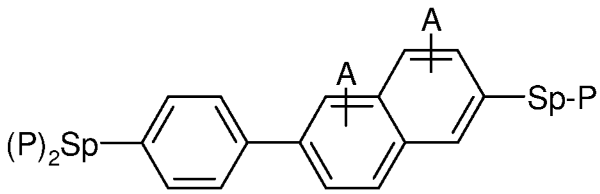
I4E-6

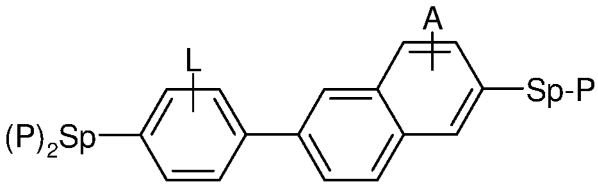
I4E-7

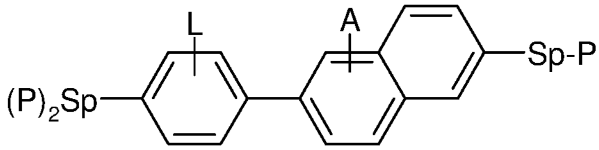
I4E-8

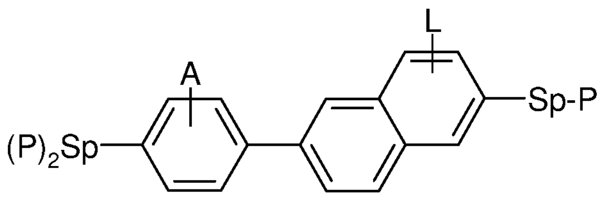
I4E-9

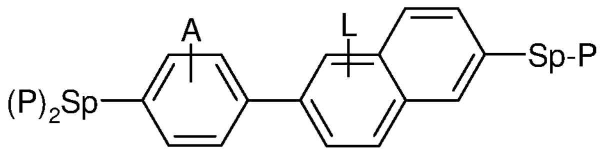
I4E-10

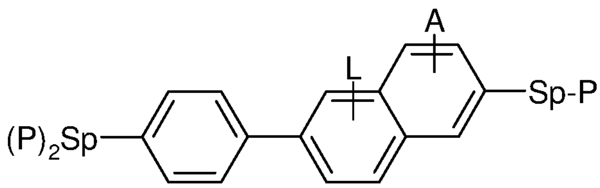
I4E-11

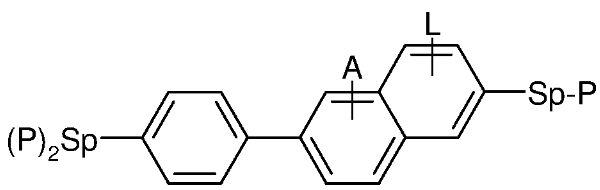
I4E-12

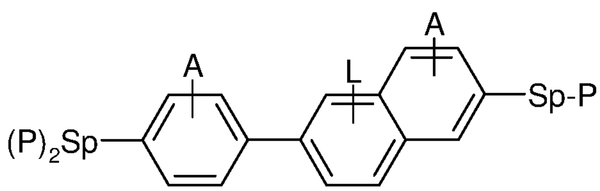
I4E-13

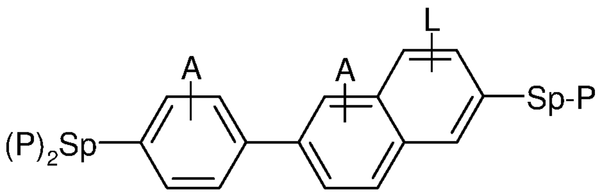

I4E-14

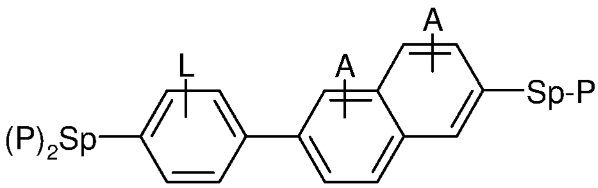

I4E-15

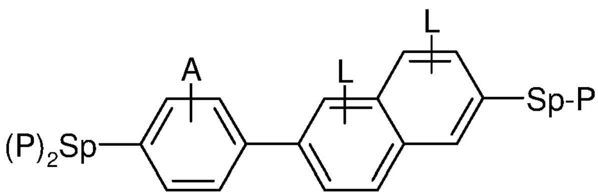

I4E-16

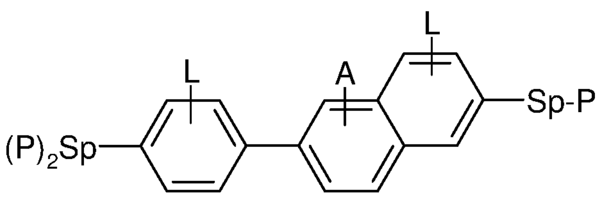

I4E-17

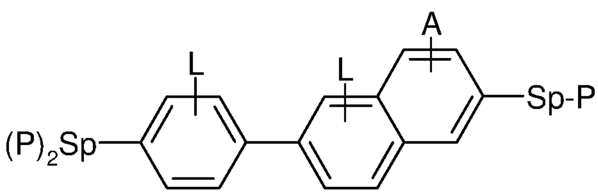

I4E-18

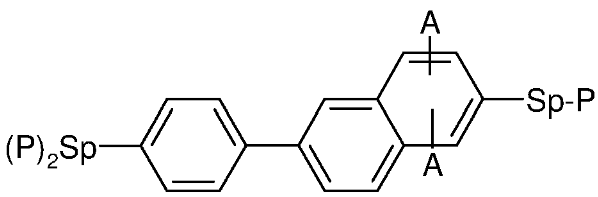

I4E-19

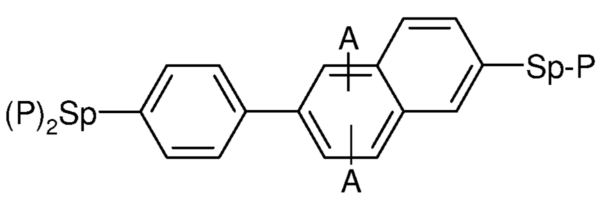

I4E-20

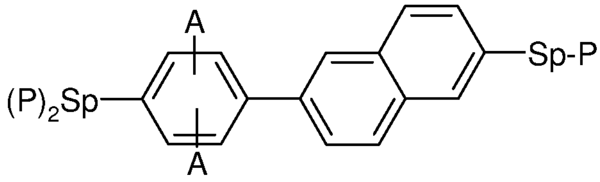

I4E-21

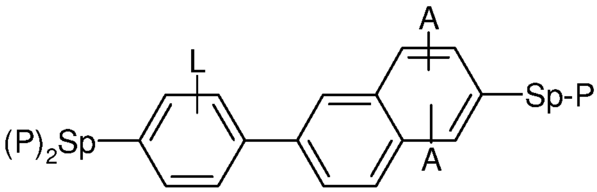

I4E-22

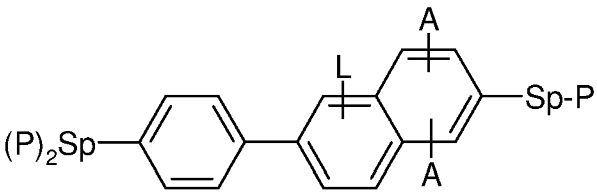

I4E-23

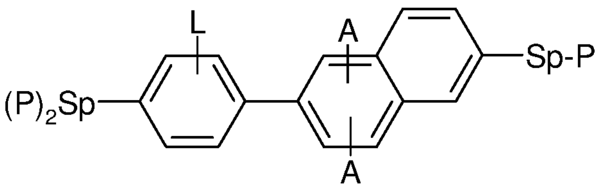

I4E-24

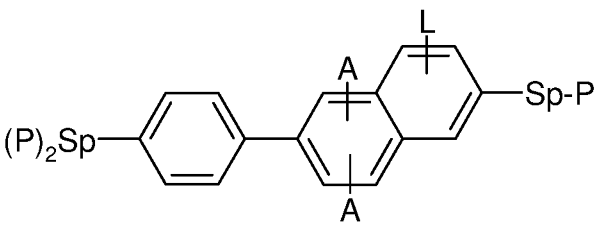

I4E-25

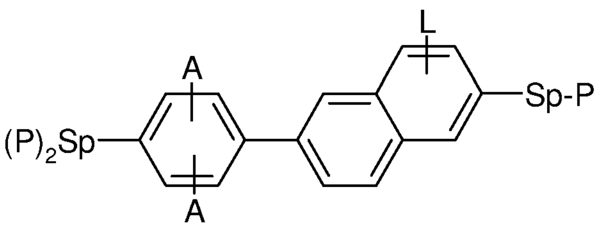

I4E-26

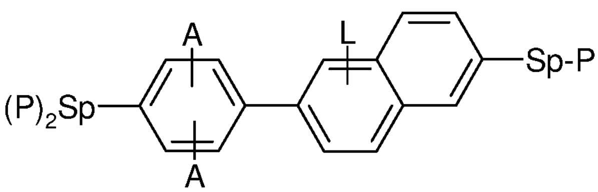

I4E-27

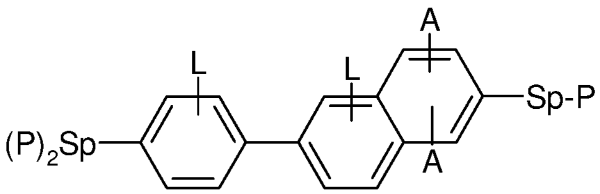

I4E-28

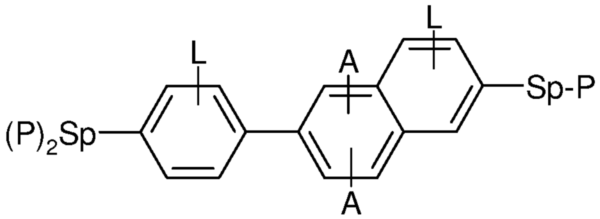

I4E-29

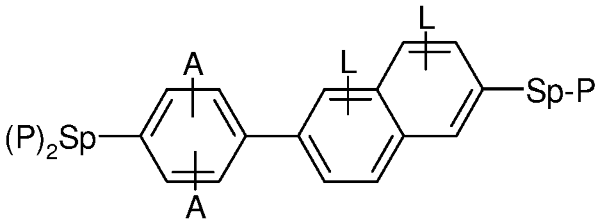

I4E-30

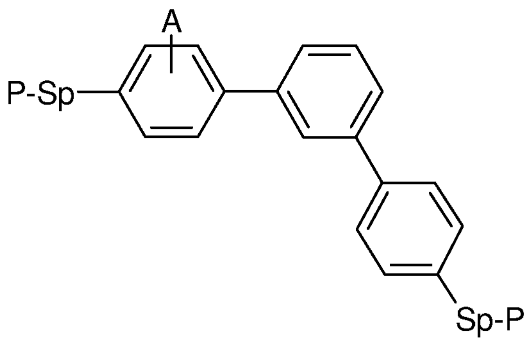

I5A-1

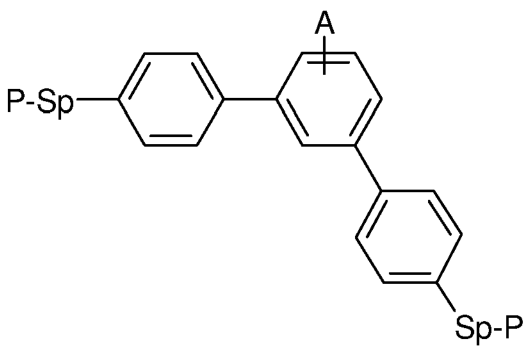

I5A-2

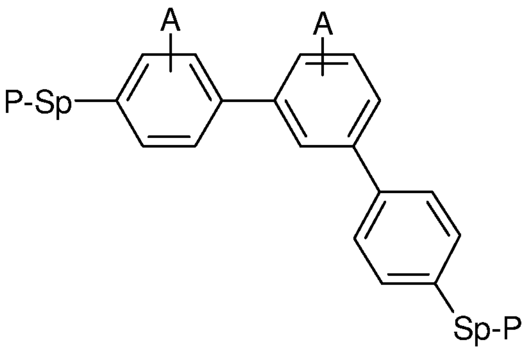

I5A-3

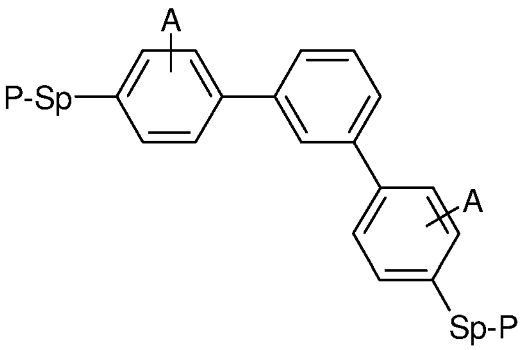

I5A-4

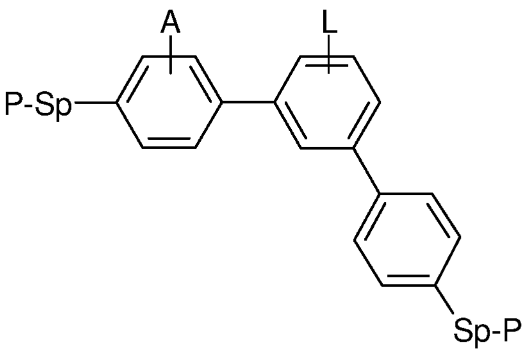

I5A-5

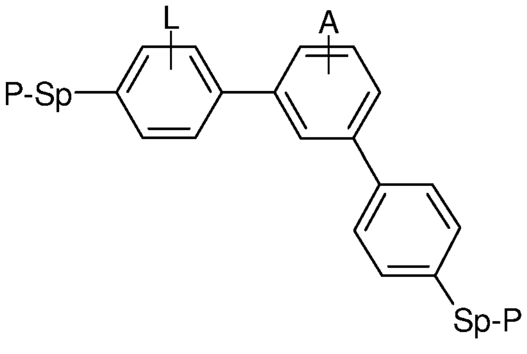

I5A-6

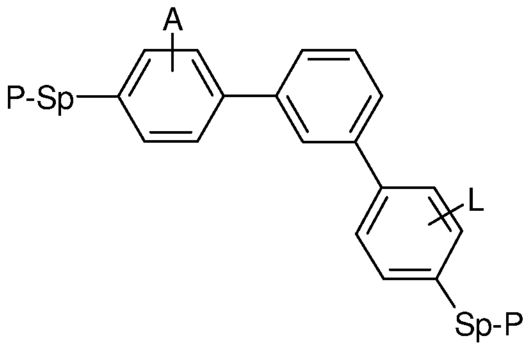

I5A-7

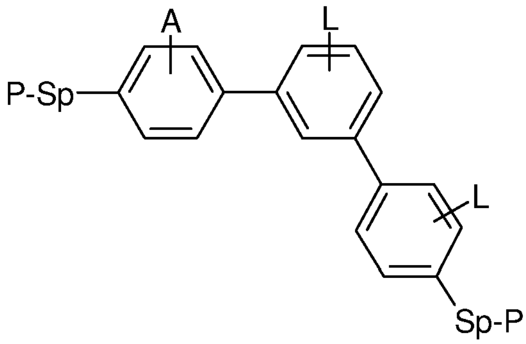

I5A-8

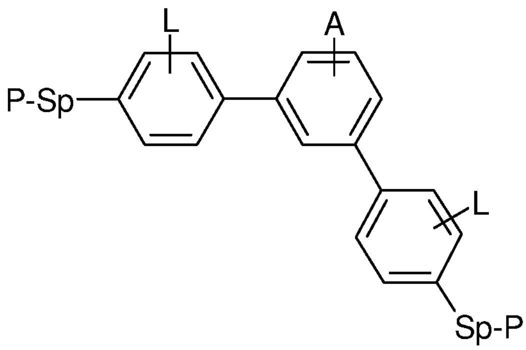

I5A-9

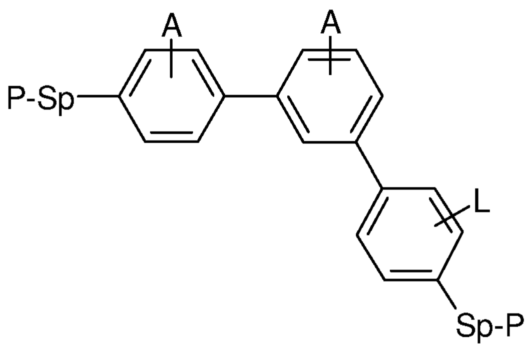

I5A-10

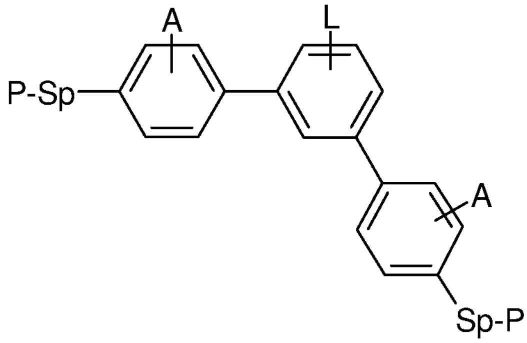

I5A-11

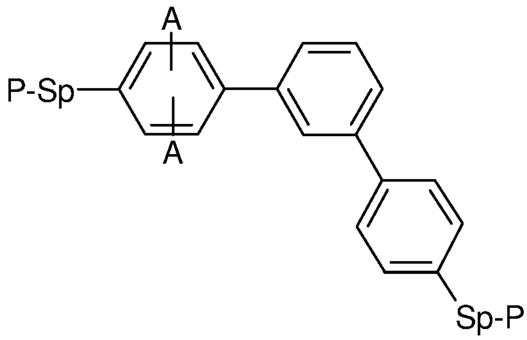

I5A-12

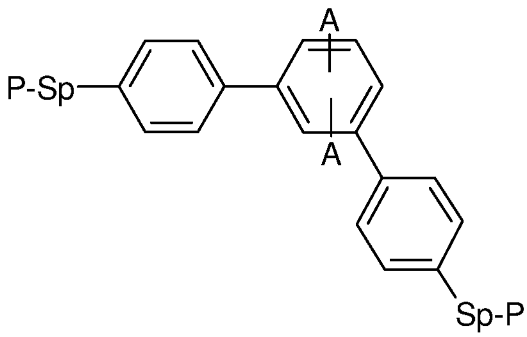

I5A-13

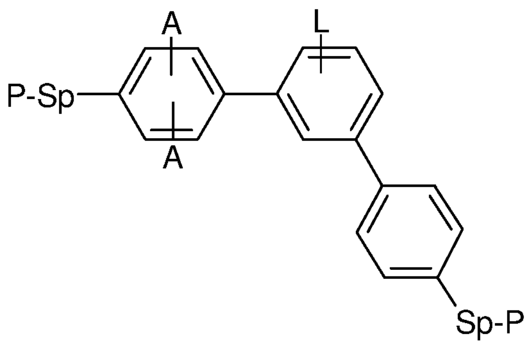

I5A-14

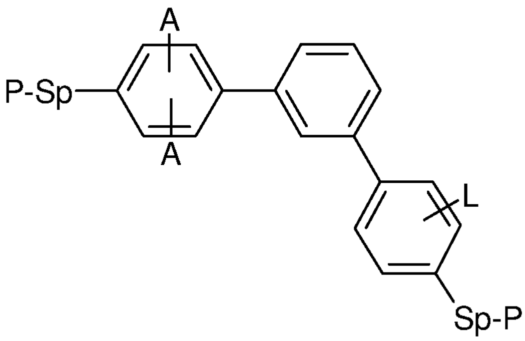

I5A-15

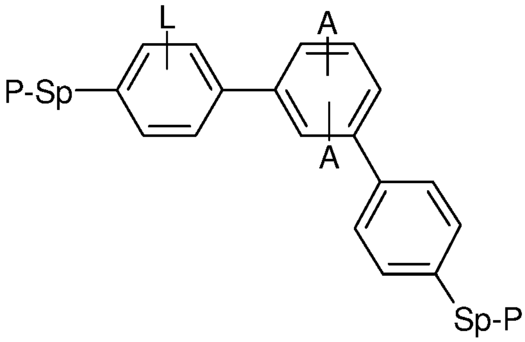

I5A-16

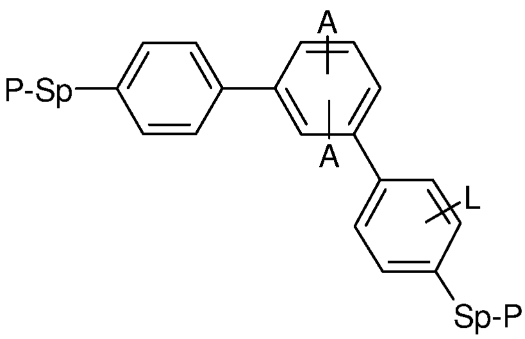

I5A-17

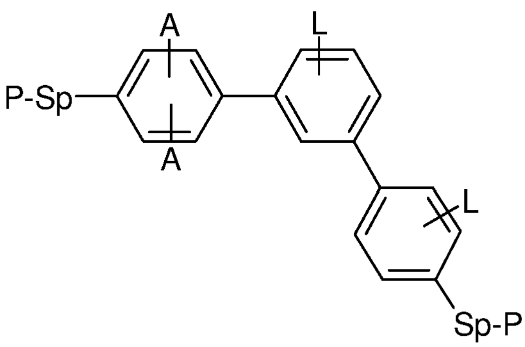

I5A-18

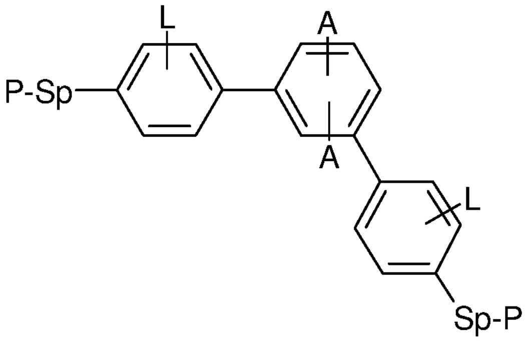

I5A-19

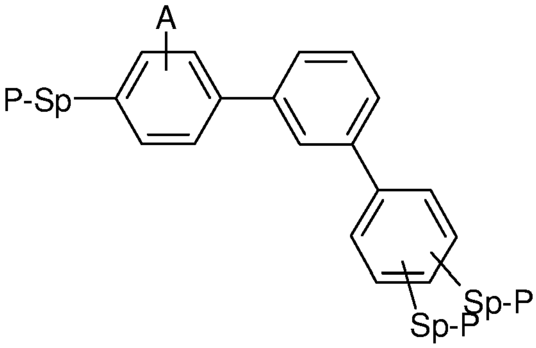

I5B-1

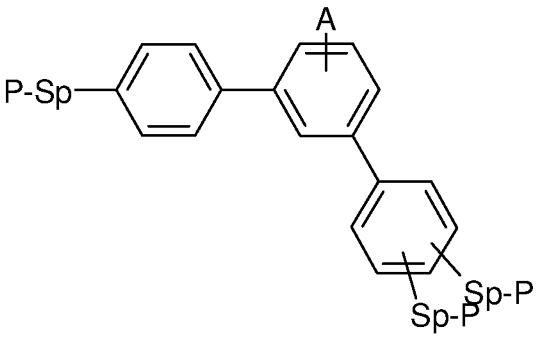

I5B-2

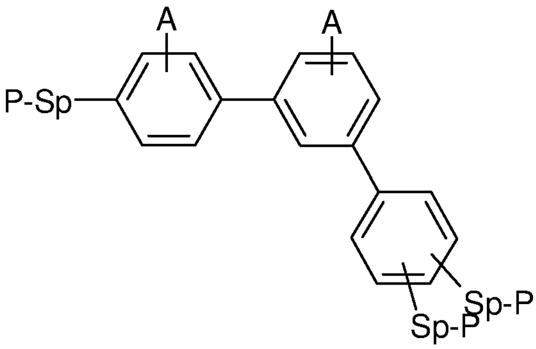

I5B-3

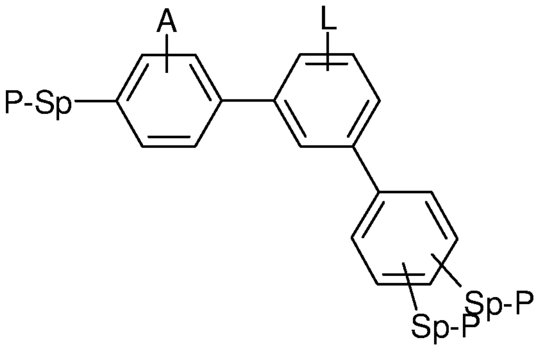

I5B-4

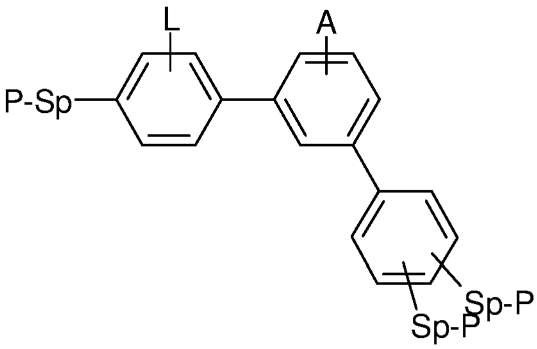

I5B-5

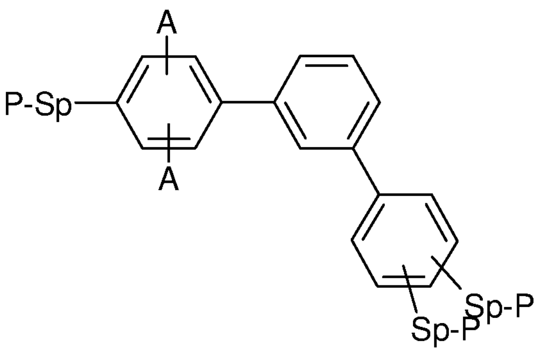

I5B-6

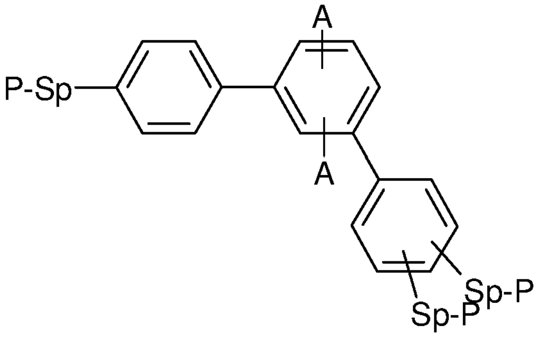

I5B-7

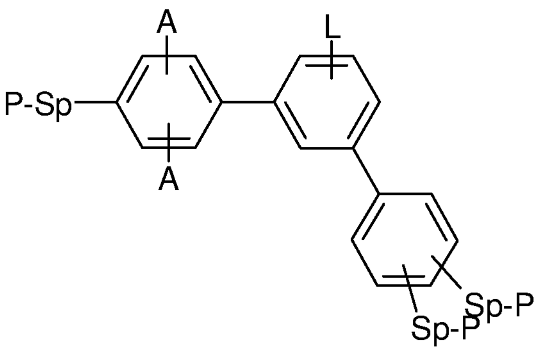

I5B-8

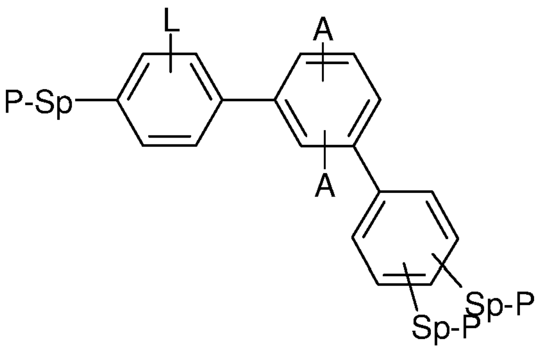

I5B-9

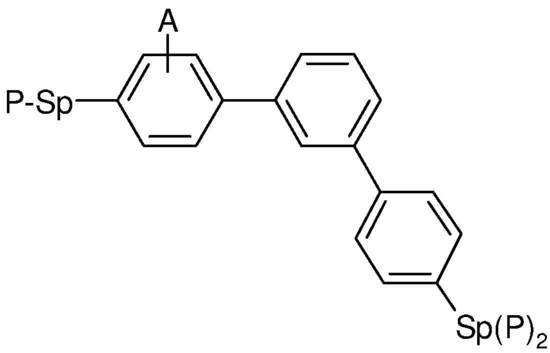

I5C-1

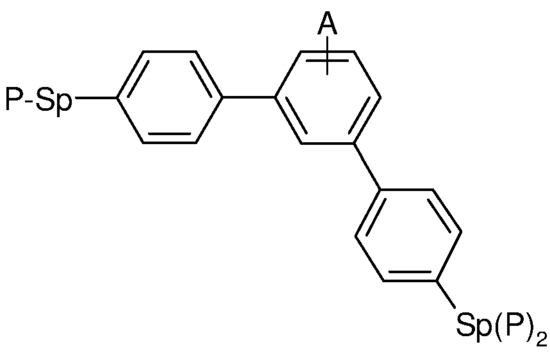

I5C-2

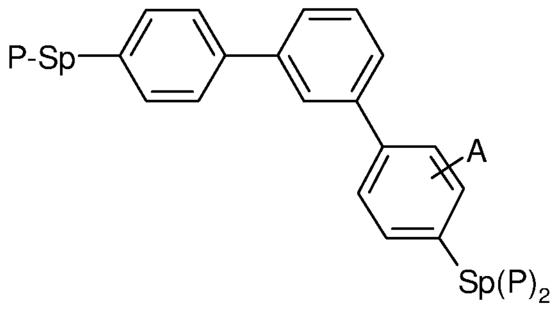

I5C-3

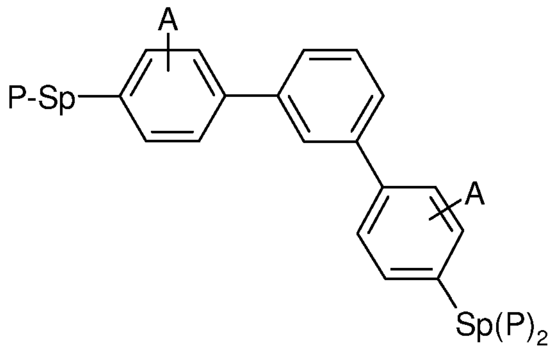

I5C-4

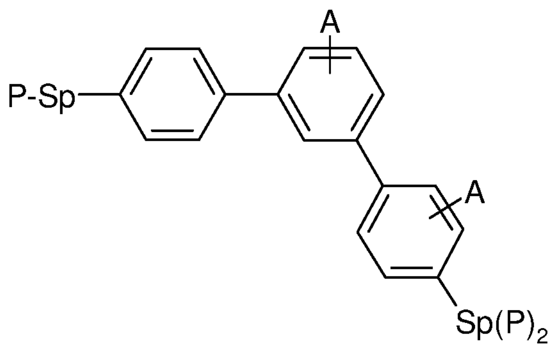

I5C-5

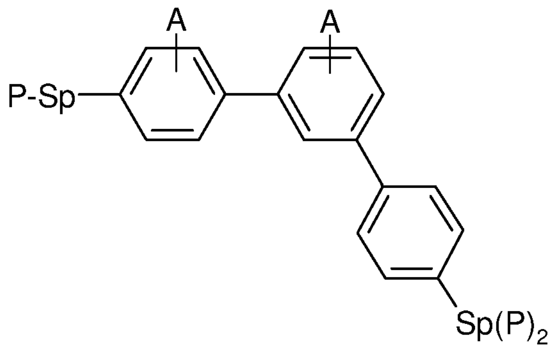

I5C-6

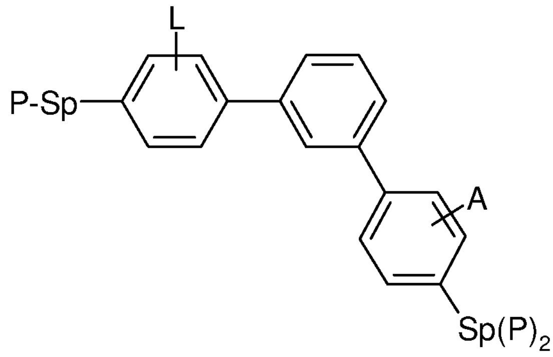

I5C-7

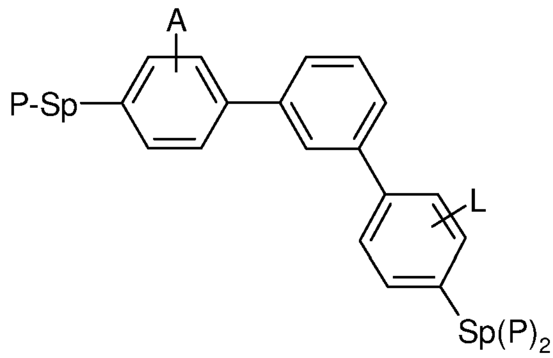

I5C-8

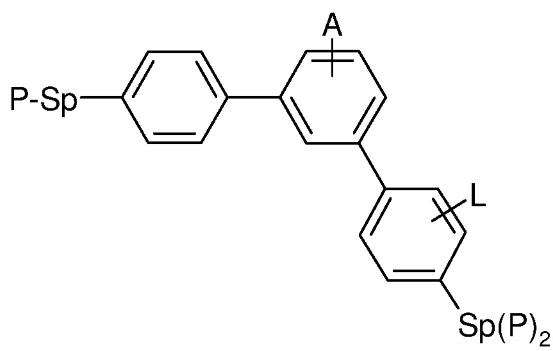

I5C-9

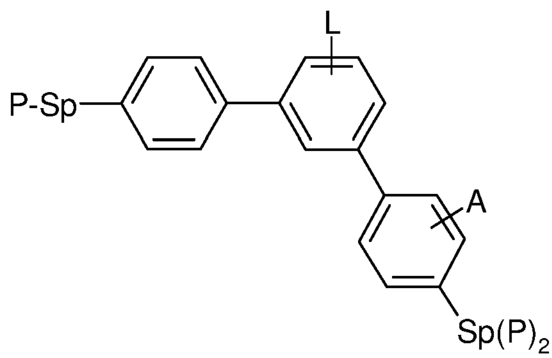

I5C-10

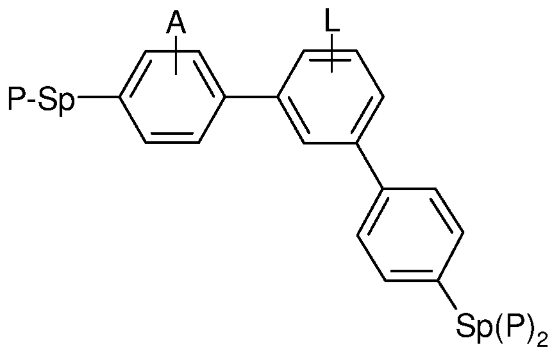

I5C-11

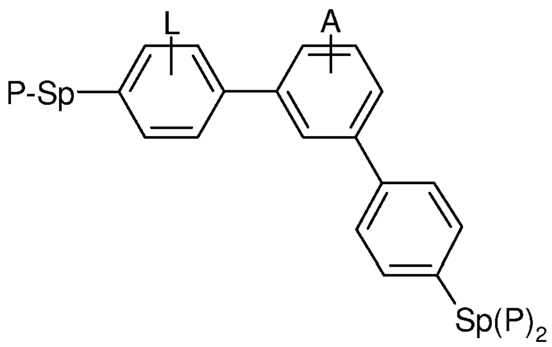

I5C-12

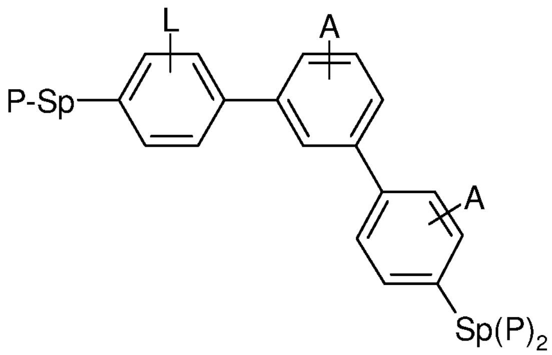

I5C-13

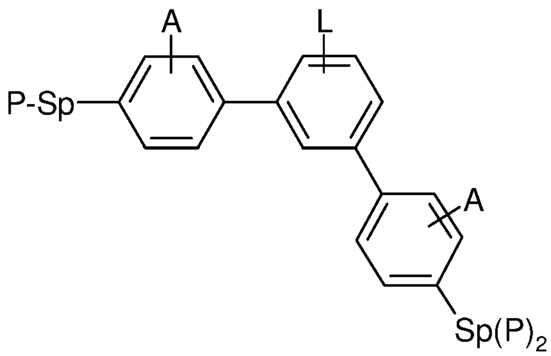

I5C-14

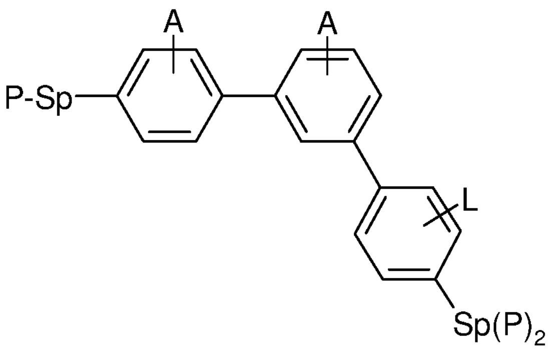

I5C-15

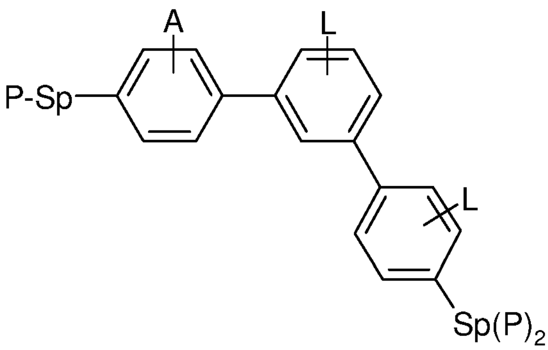

I5C-16

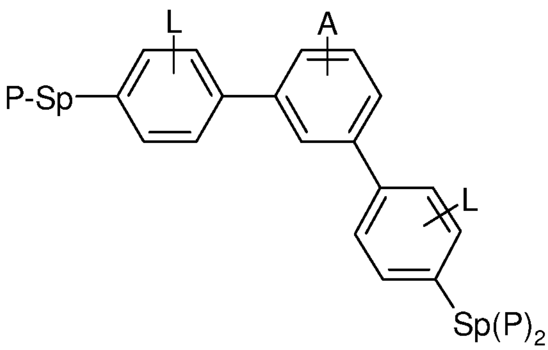

I5C-17

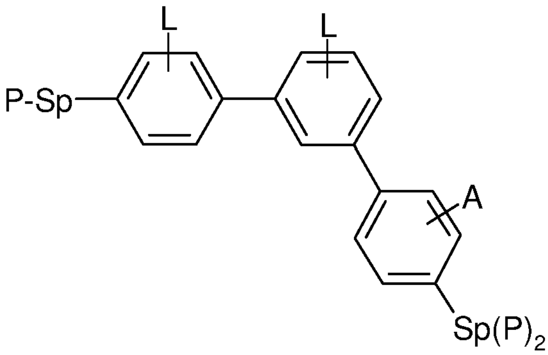

I5C-18

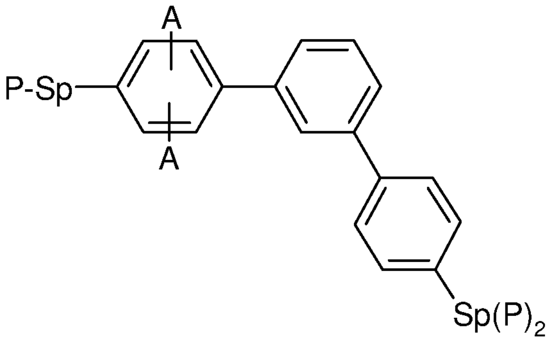

I5C-19

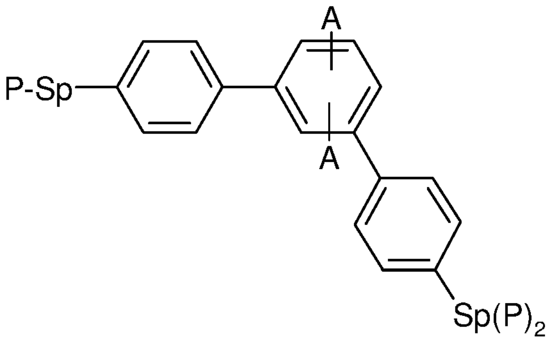

I5C-20

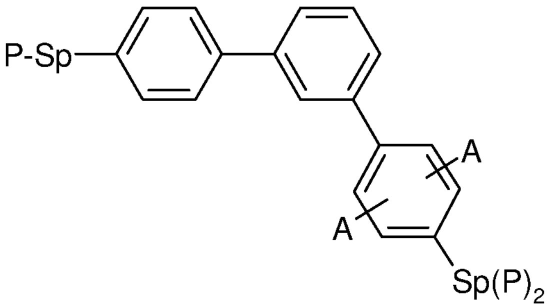

I5C-21

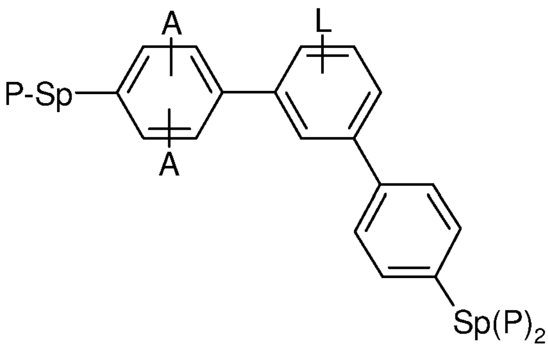

I5C-22

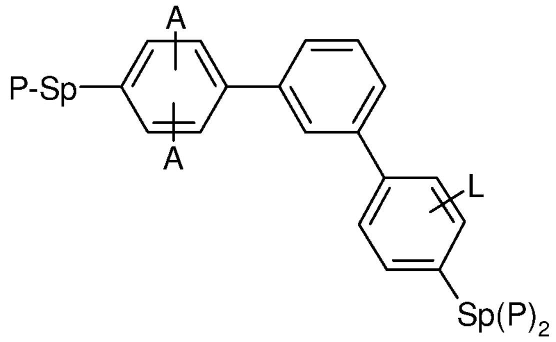

I5C-23

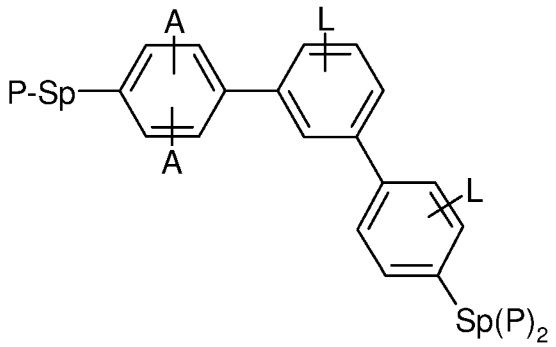

I5C-24

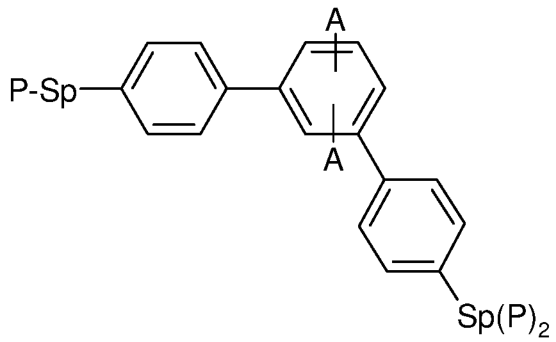

I5C-25

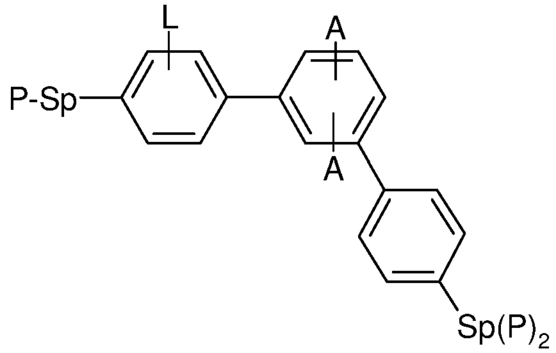

I5C-26

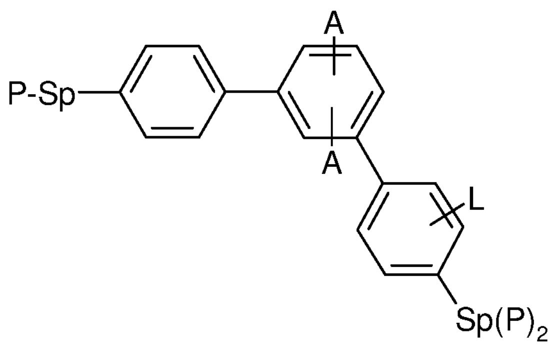

I5C-27

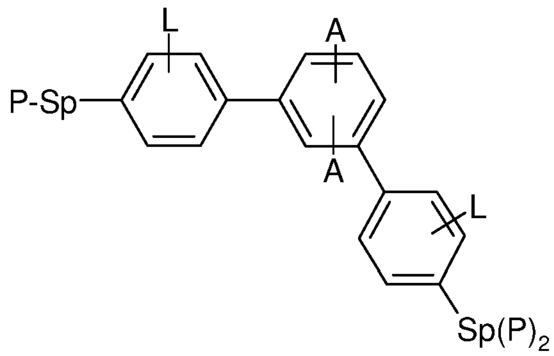

I5C-28

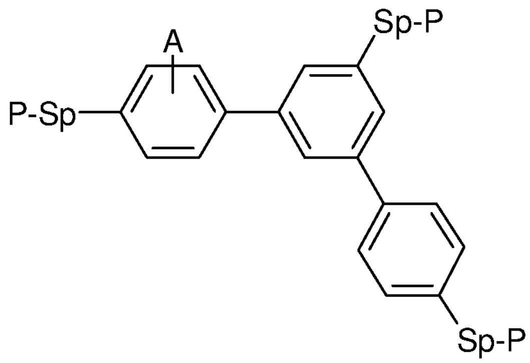

I5D-1

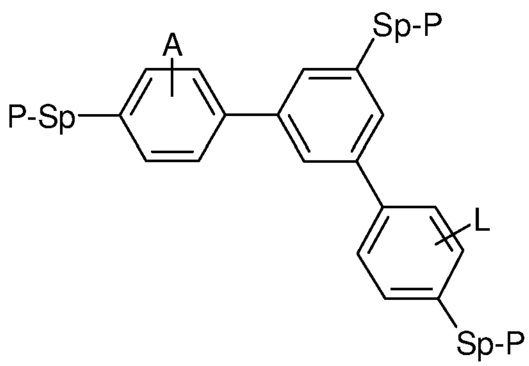

I5D-2

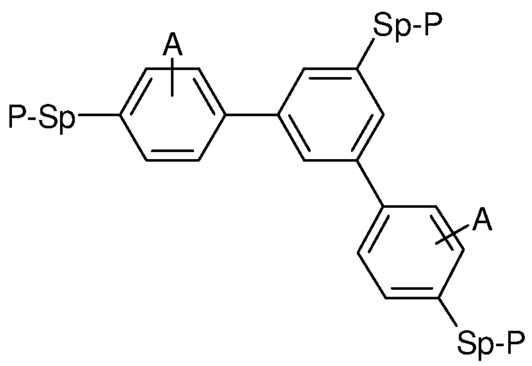

I5D-3

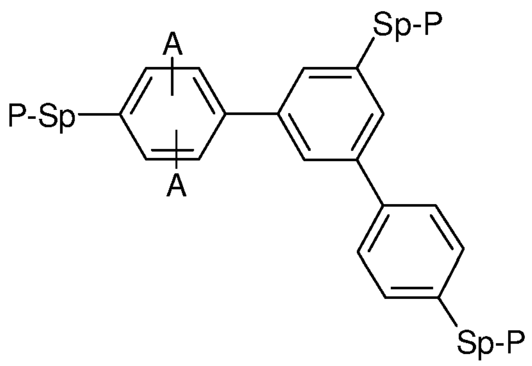

I5D-4

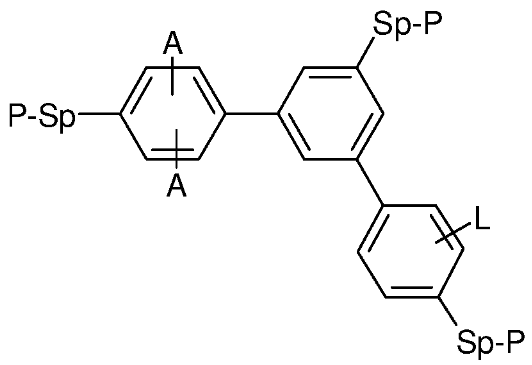

I5D-5

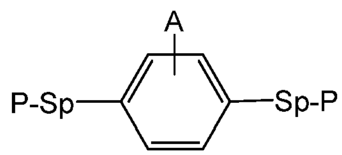

I6A-1

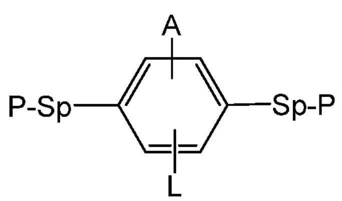

I6A-2

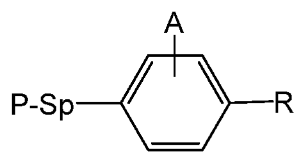

I6B-1

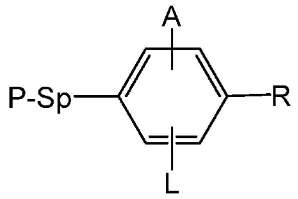

I6B-2

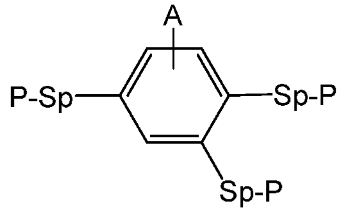

I6C-1

wherein R, P, Sp, $Sp(P)_2$, A and L have the meanings given in formula I or one of the preferred meanings as given above and below, L is preferably F, Cl or CN, A is preferably thioalkyl with 1 to 7 C atoms which is preferably straight-chain, more preferably $-SCH_3$, $-SC_2H_5$ or $-SC_3H_7$, very preferably - $SCH_3$, further preferably $-CH_2S-CH_3$ or $-CH_2-S-C_2H_5$.

Especially preferred are compounds selected from the group consisting of formulae I1A-1 to I2G-4.

Further preferred compounds of formula I, I1 to I6, I12, I1A-I5D, I12A-I12G and I1A-1 to I6C-1 are selected from the following subformulae:

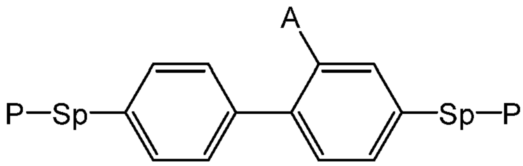

I1A-1-1

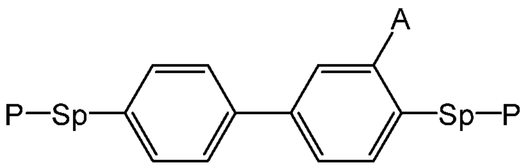

I1A-1-2

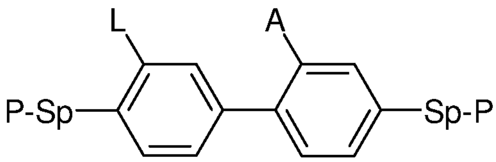

I1A-2-1

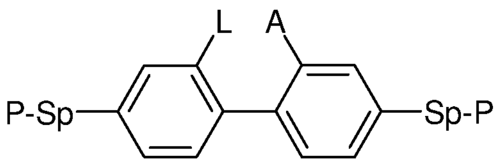

I1A-2-2

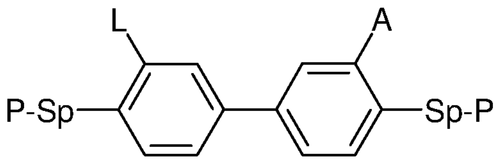

I1A-2-3

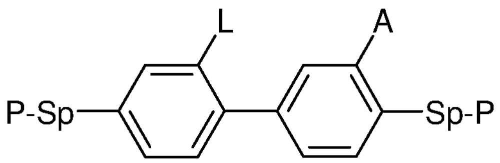

I1A-2-4

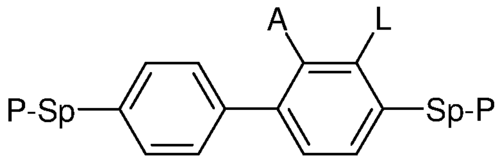

I1A-3-1

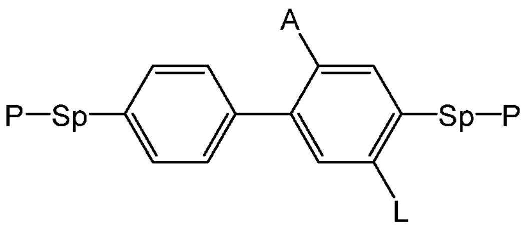

I1A-3-2

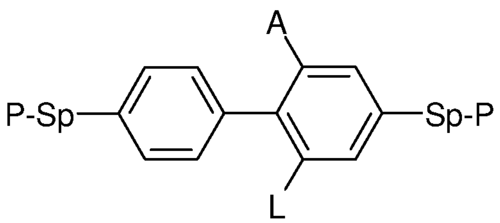

I1A-3-3

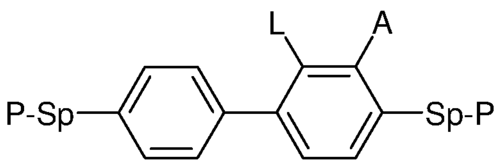

I1A-3-4

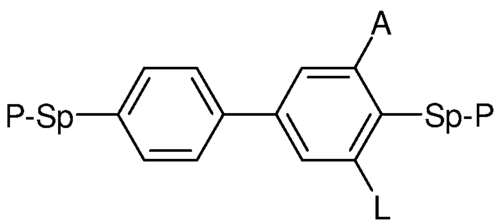

I1A-3-5

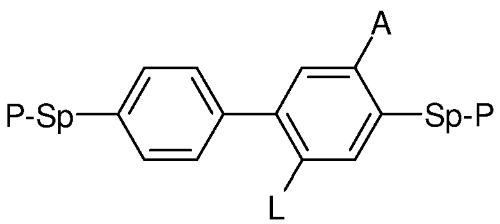

I1A-3-6

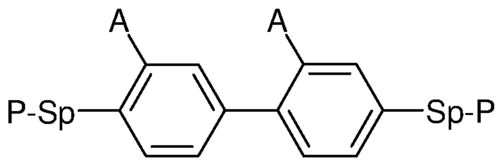
I1A-4-1

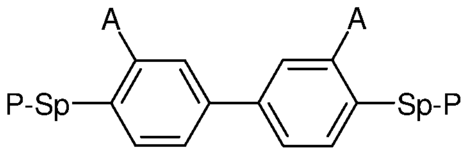
I1A-4-2

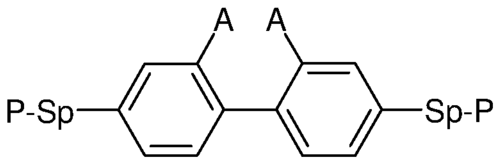
I1A-4-3

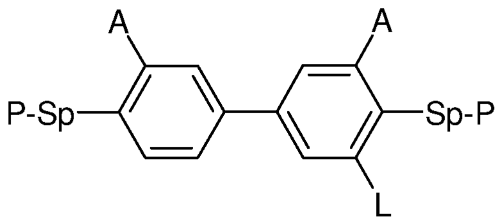
I1A-5-1

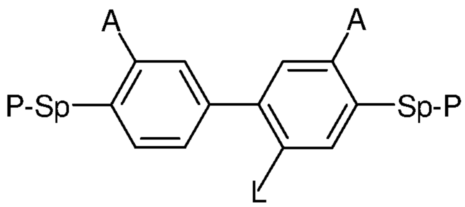
I1A-5-2

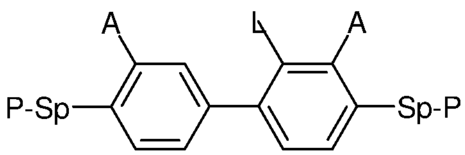
I1A-5-3

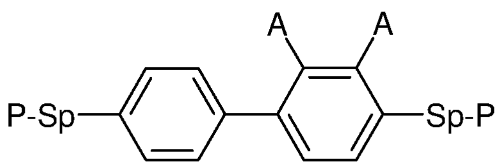
I1A-6-1

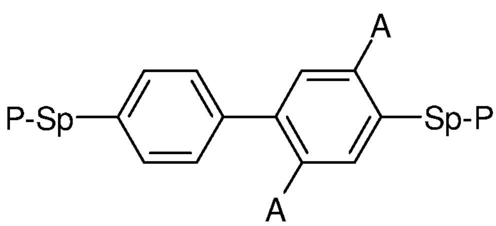
I1A-6-2

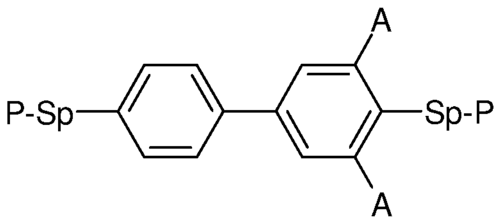

I1A-6-3

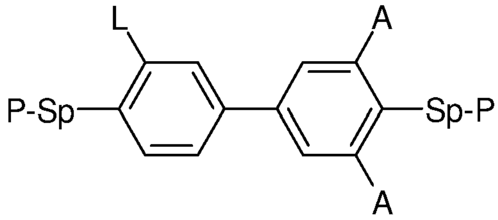

I1A-7-1

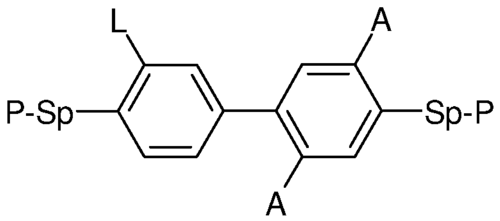

I1A-7-2

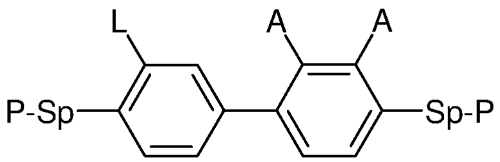

I1A-7-3

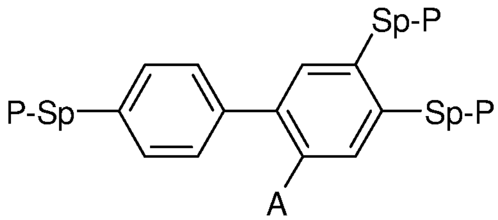

I1B-1-1

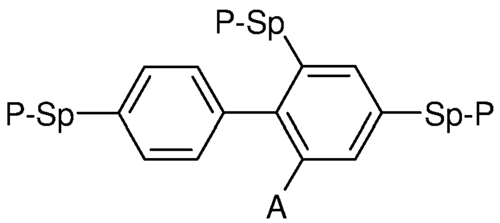

I1B-1-2

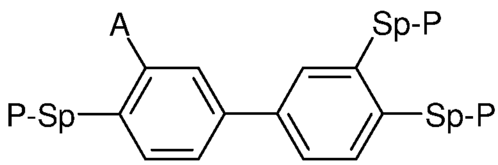

I1B-2-1

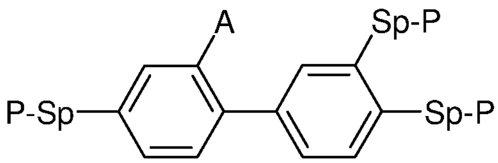

I1B-2-2

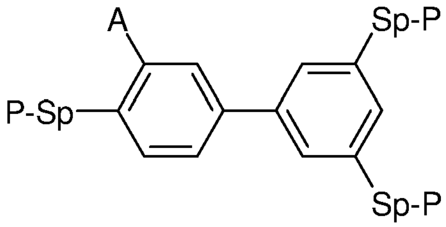

I1B-2-3

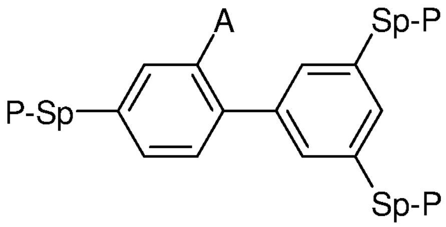

I1B-2-4

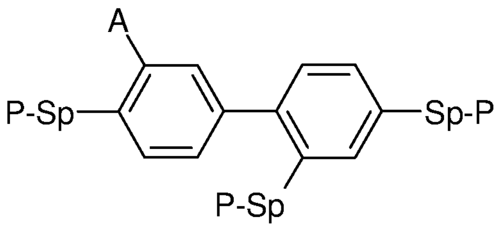

I1B-2-5

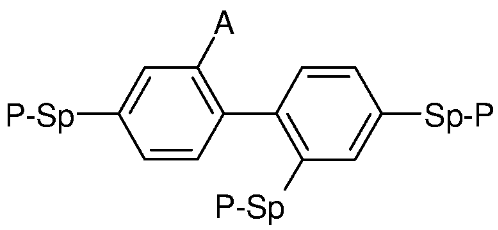

I1B-2-6

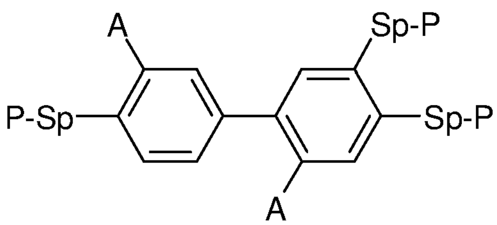

I1B-3-1

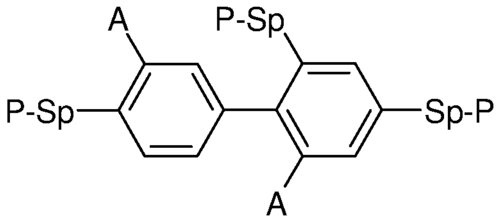

I1B-3-2

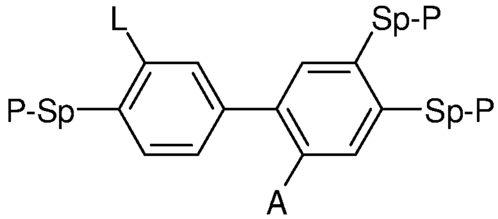

I1B-4-1

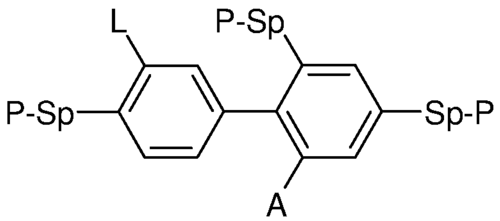

I1B-4-2

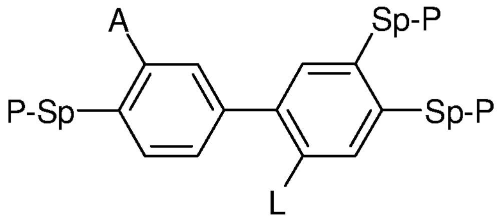

I1B-5-1

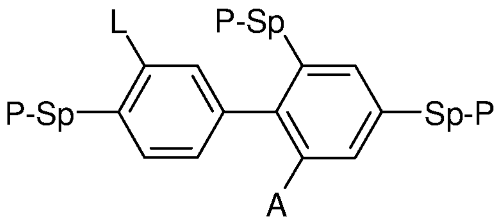

I1B-5-2

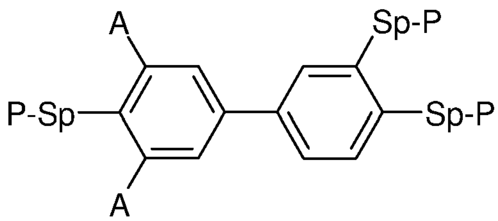

I1B-6-1

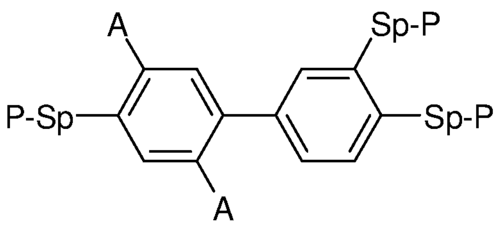

I1B-6-2

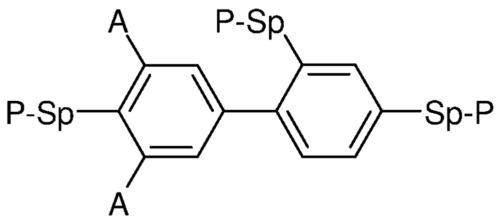

I1B-6-3

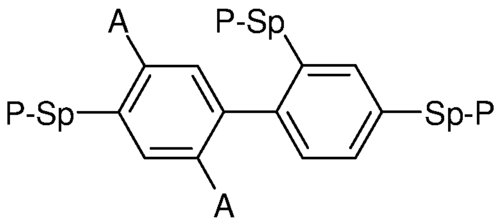

I1B-6-4

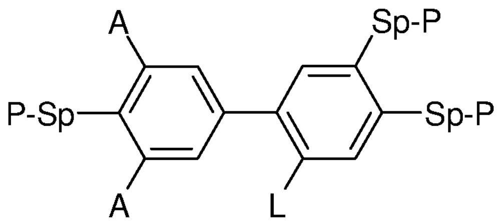

I1B-7-1

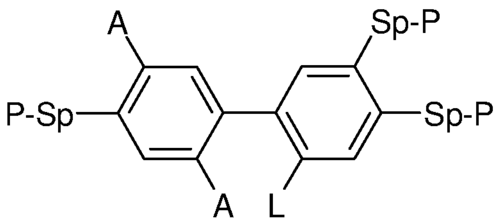

I1B-7-2

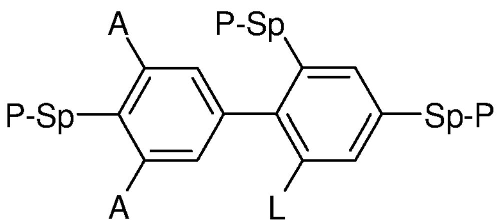

I1B-7-3

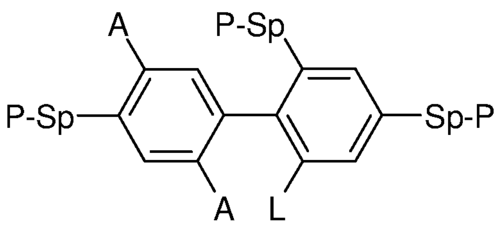

I1B-7-4

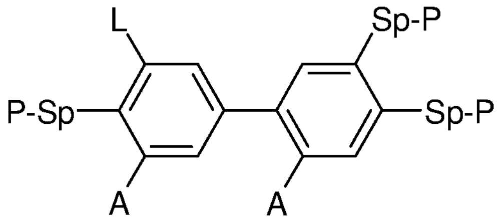

I1B-8-1

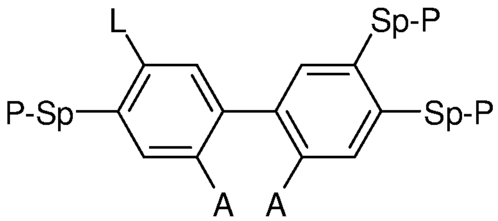

I1B-8-2

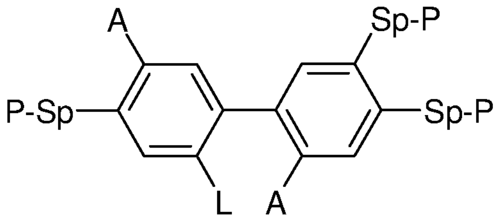

I1B-8-3

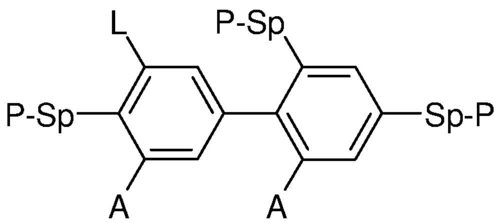

I1B-8-4

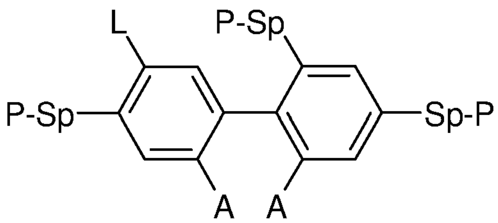

I1B-8-5

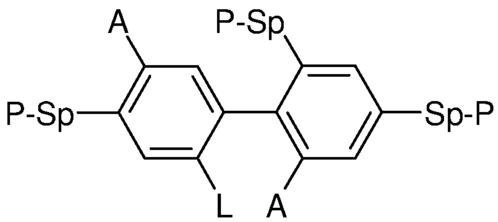

I1B-8-6

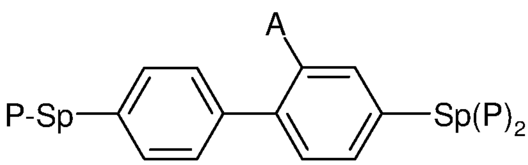

I1C-1-1

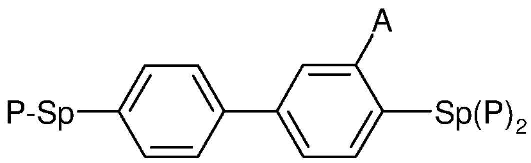

I1C-1-2

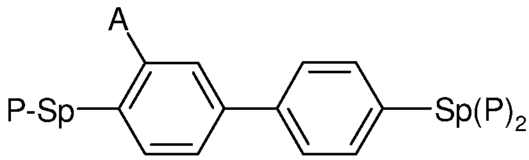

I1C-2-1

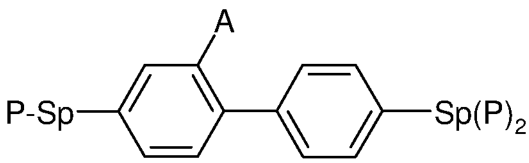

I1C-2-2

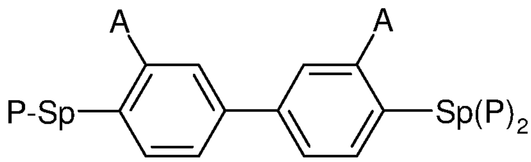

I1C-3-1

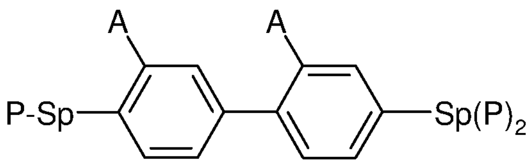

I1C-3-2

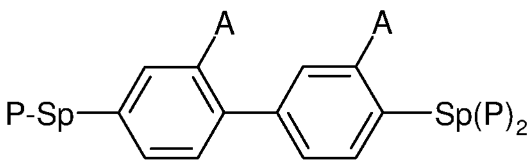

I1C-3-3

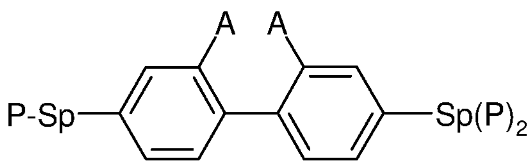

I1C-3-4

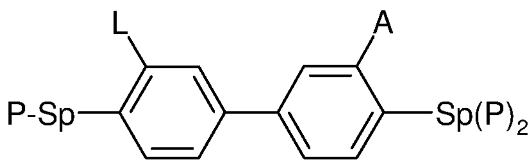

I1C-4-1

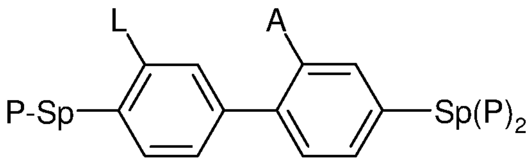

I1C-4-2

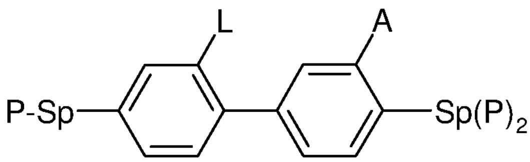

I1C-4-3

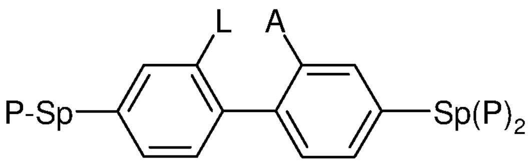

I1C-4-4

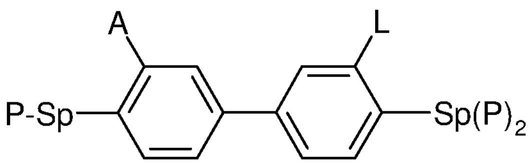

I1C-5-1

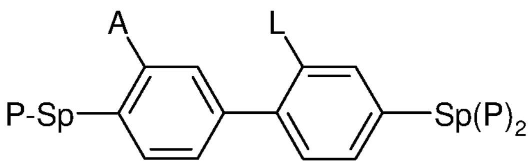

I1C-5-2

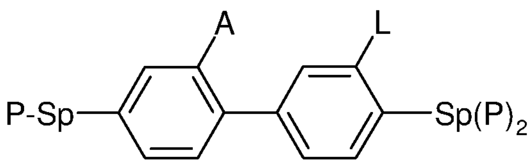

I1C-5-3

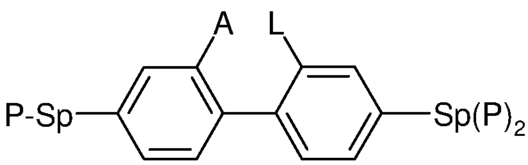

I1C-5-4

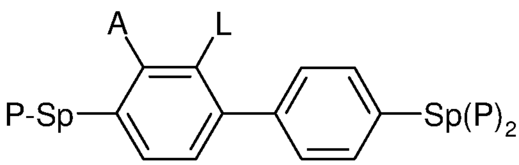

I1C-6-1

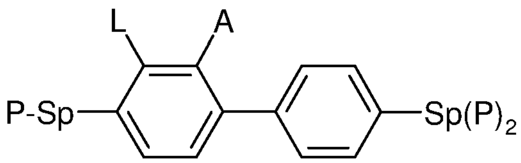

I1C-6-2

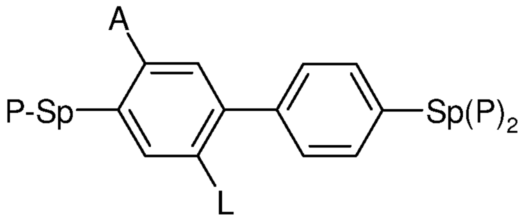

I1C-6-3

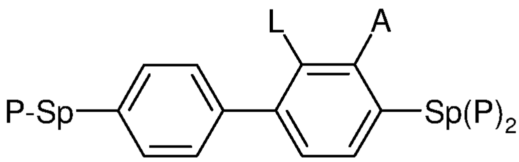

I1C-7-1

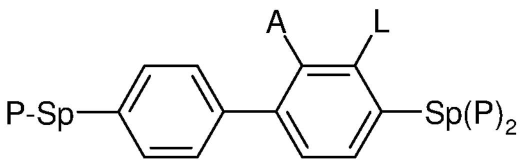

I1C-7-2

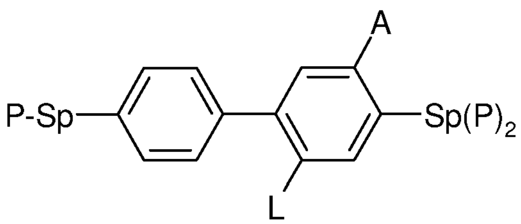

I1C-7-3

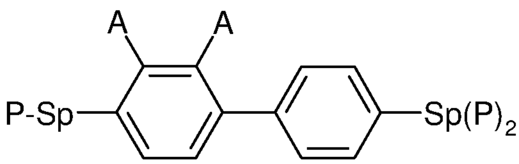

I1C-8-1

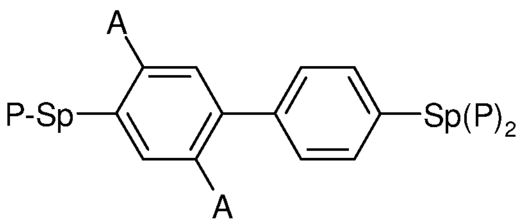

I1C-8-2

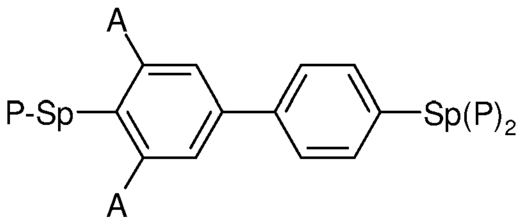

I1C-8-3

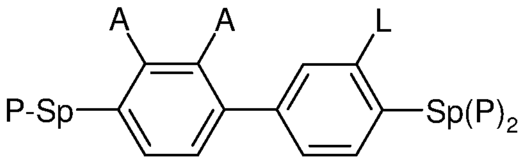

I1C-9-1

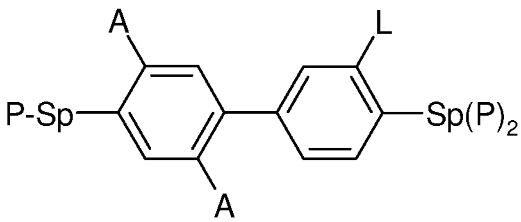

I1C-9-2

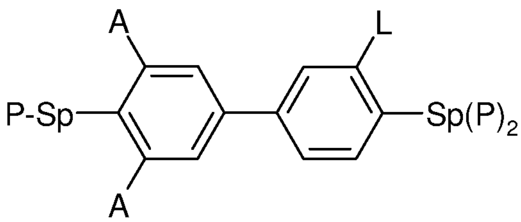

I1C-9-3

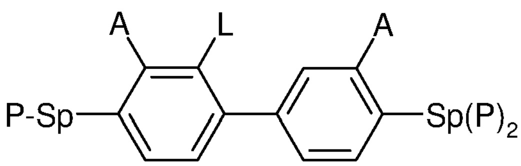

I1C-10-1

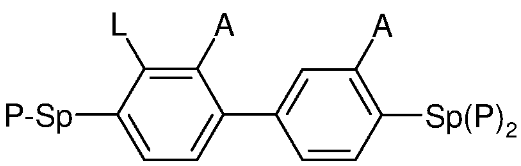

I1C-10-2

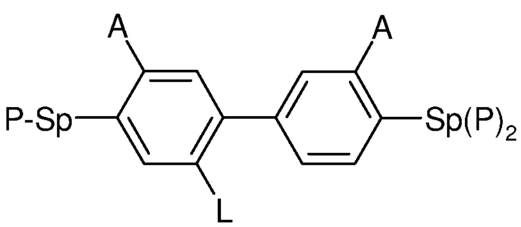

I1C-10-3

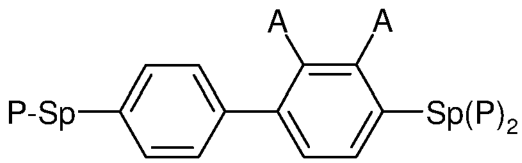

I1C-11-1

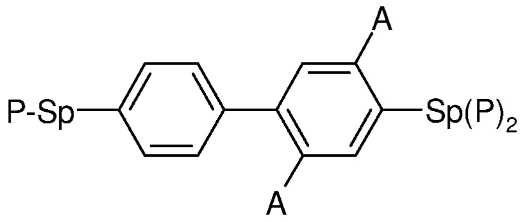

I1C-11-2

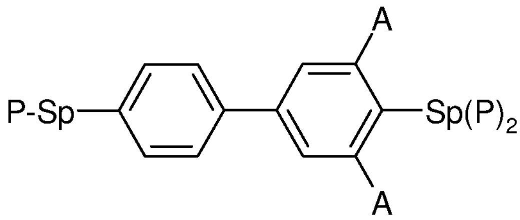

I1C-11-3

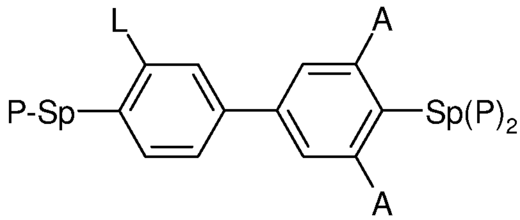

I1C-12-1

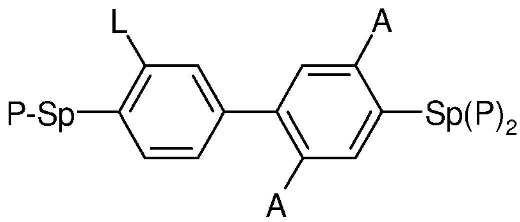

I1C-12-2

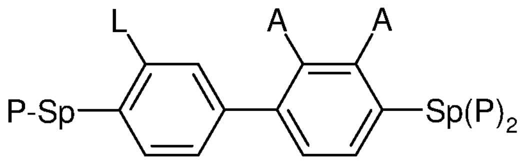

I1C-12-3

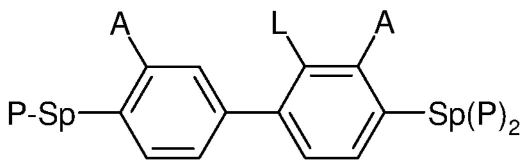

I1C-13-1

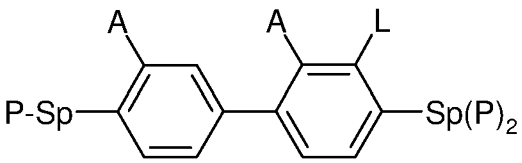

I1C-13-2

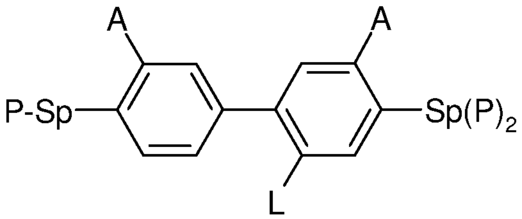

I1C-13-3

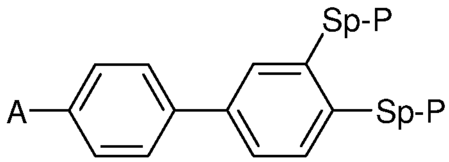

I1D-1-1

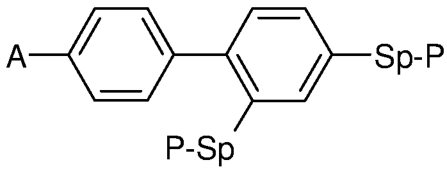

I1D-1-2

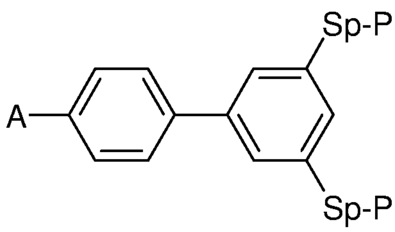

I1D-1-3

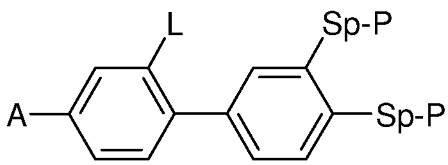

I1D-2-1

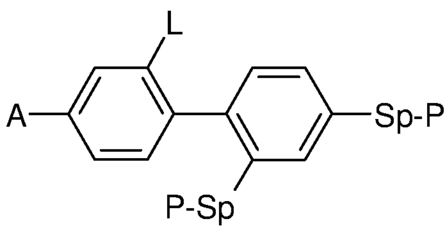

I1D-2-2

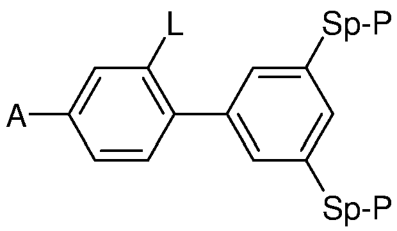

I1D-2-3

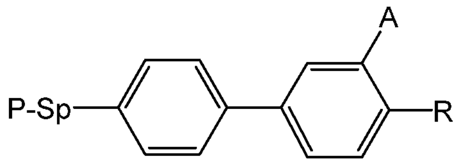

I1E-1-1

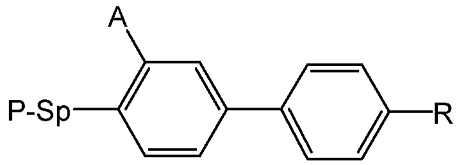

I1E-2-1

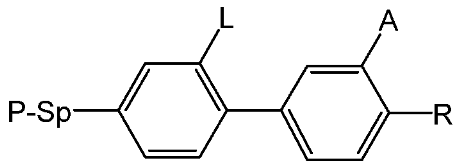

I1E-3-1

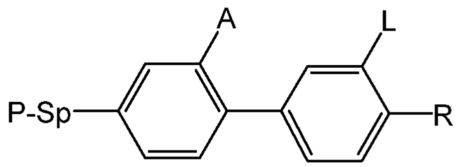

I1E-4-1

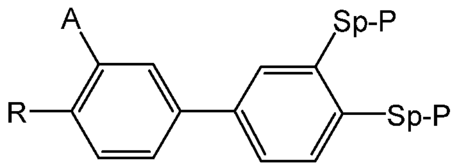

I1F-1-1

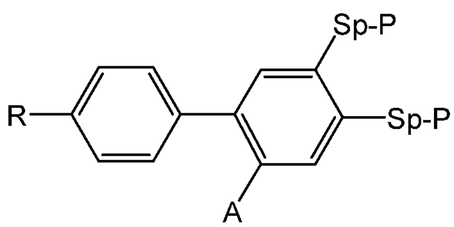

I1F-2-1

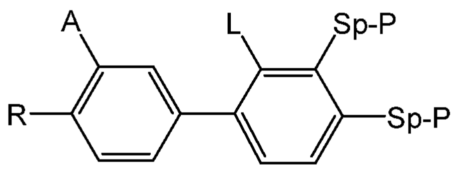

I1F-3-1

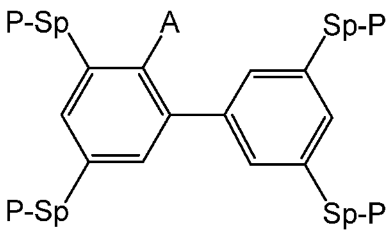

I1G-1-1

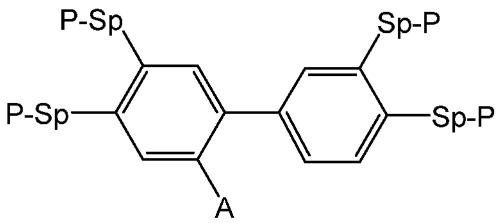

I1G-3-1

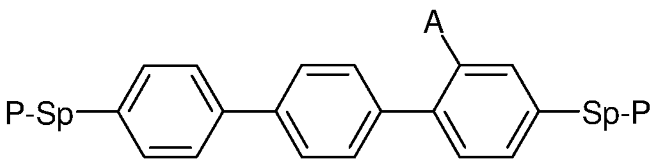

I2A-1-1

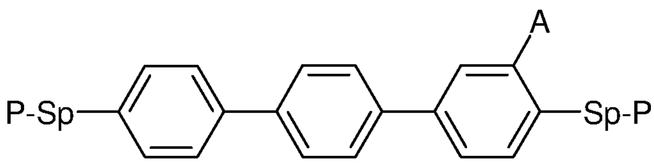

I2A-1-2

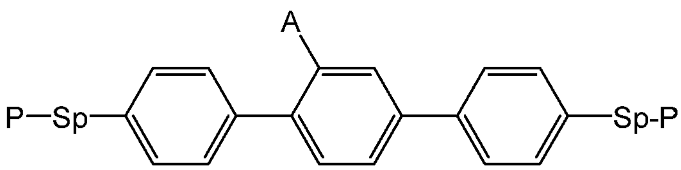

I2A-2-1

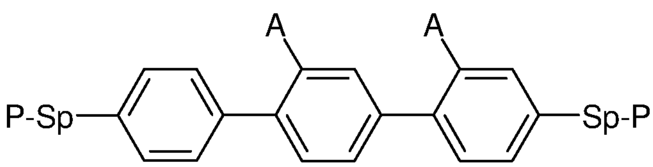

I2A-3-1

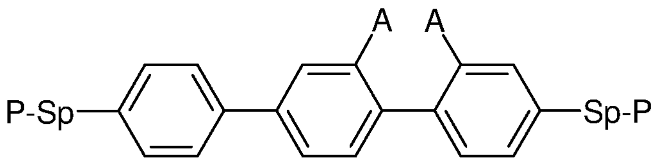

I2A-3-2

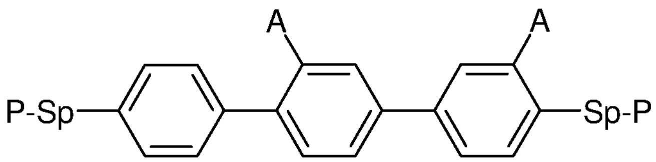

I2A-3-3

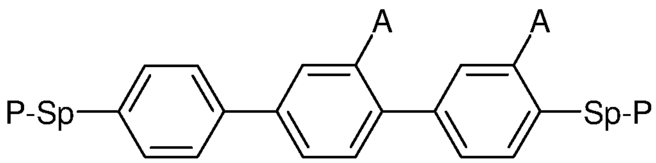

I2A-3-4

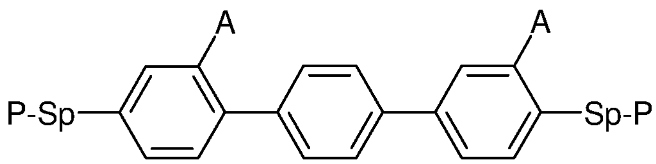

I2A-4-1

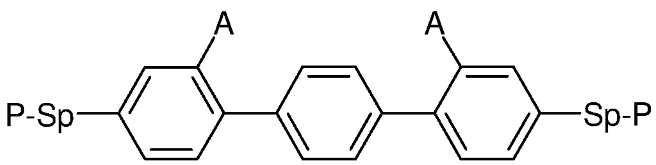

I2A-4-2

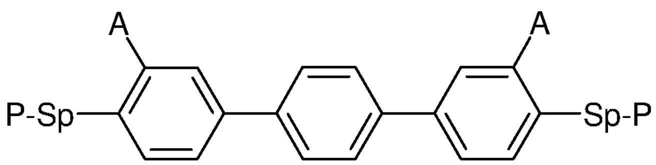

I2A-4-3

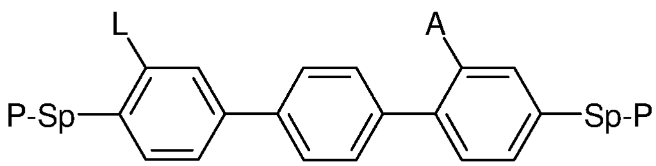

I2A-5-1

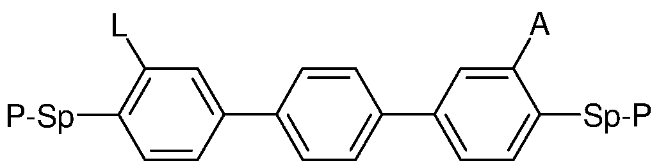

I2A-5-2

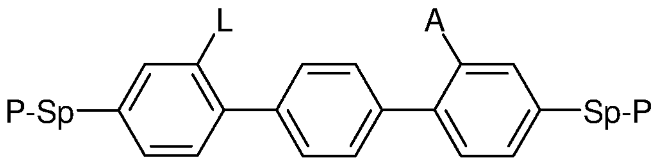

I2A-5-3

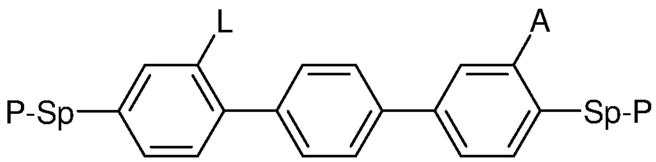

I2A-5-4

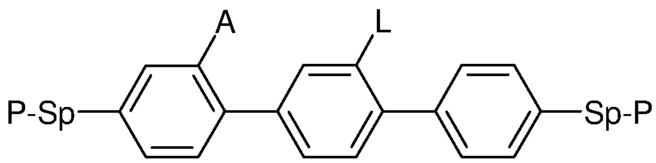

I2A-6-1

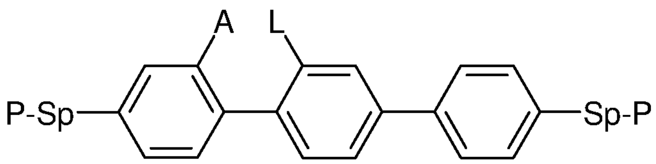

I2A-6-2

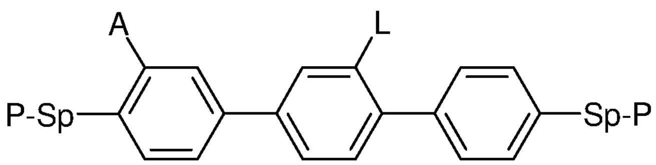

I2A-6-3

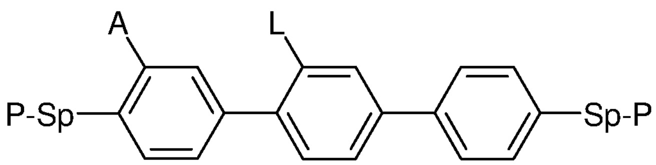

I2A-6-4

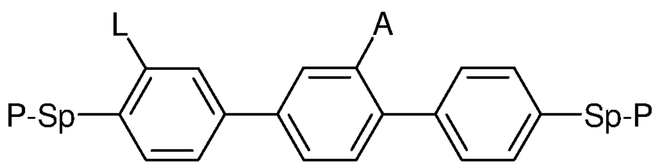

I2A-7-1

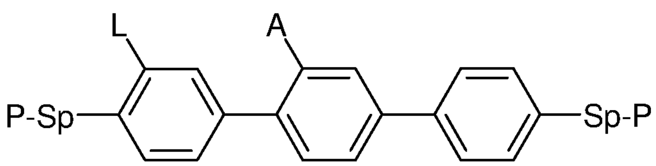

I2A-7-2

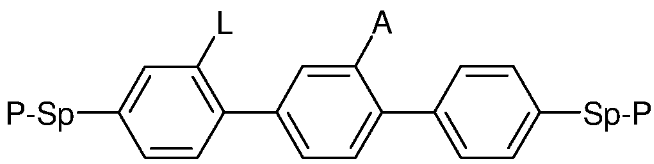

I2A-7-3

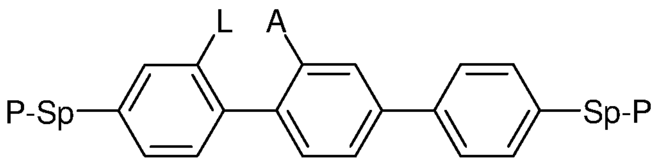

I2A-7-4

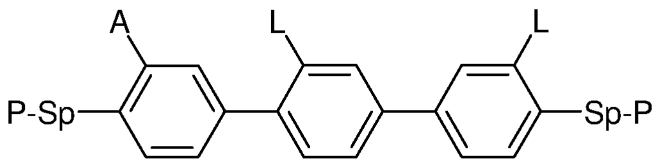

I2A-8-1

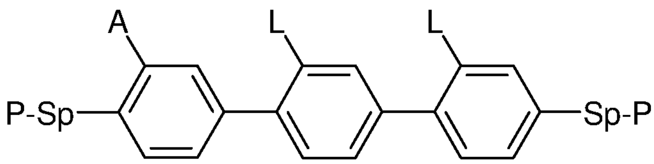

I2A-8-2

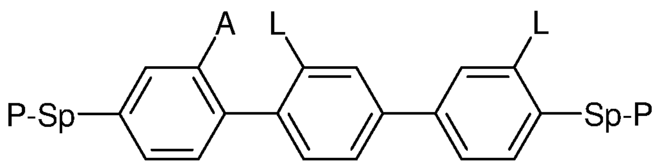

I2A-9-1

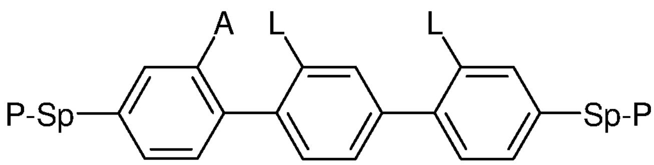

I2A-9-2

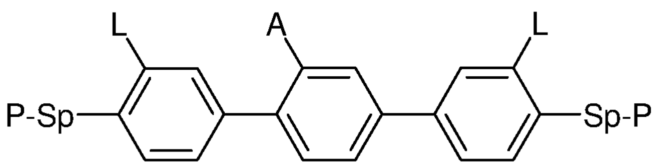

I2A-9-3

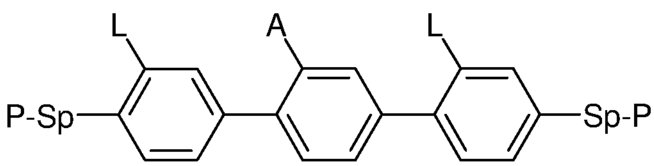

I2A-9-4

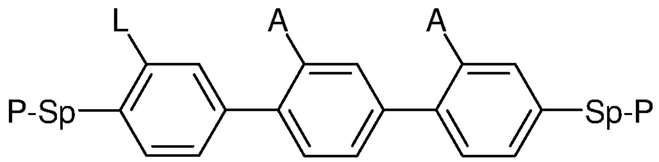

I2A-10-1

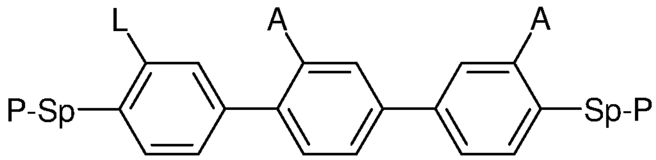

I2A-10-2

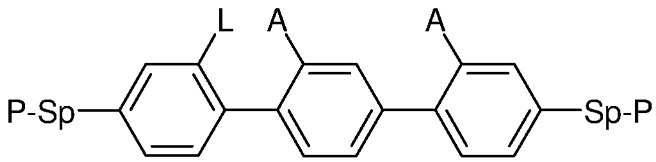

I2A-10-3

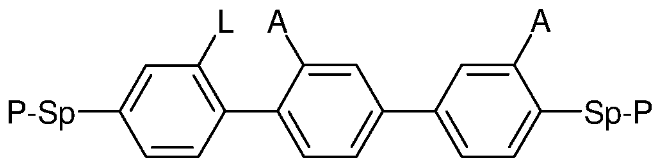

I2A-10-4

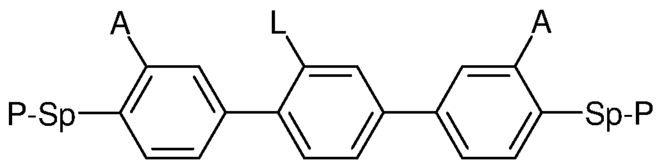

I2A-11-1

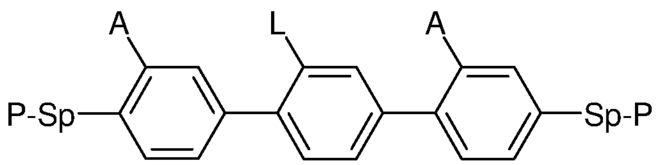

I2A-11-2

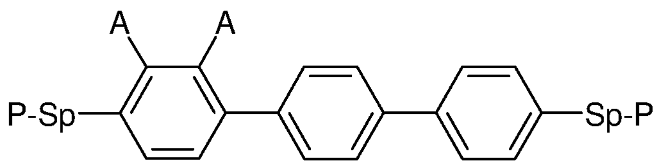

I2A-12-1

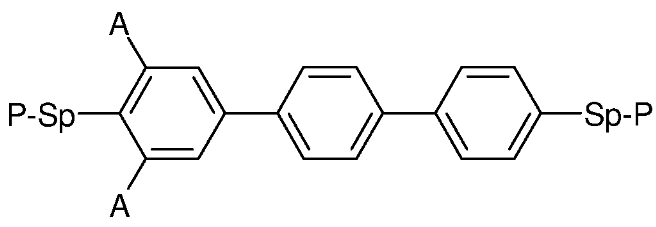

I2A-12-2

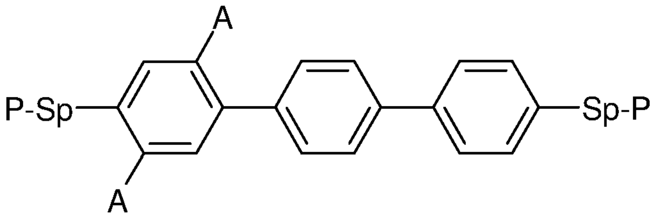

I2A-12-3

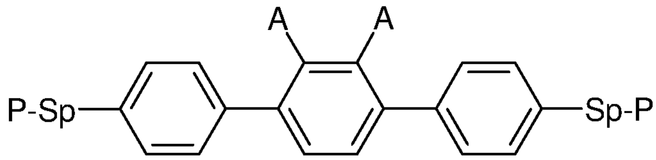

I2A-13-1

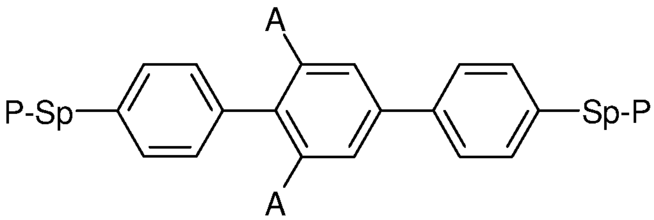

I2A-13-2

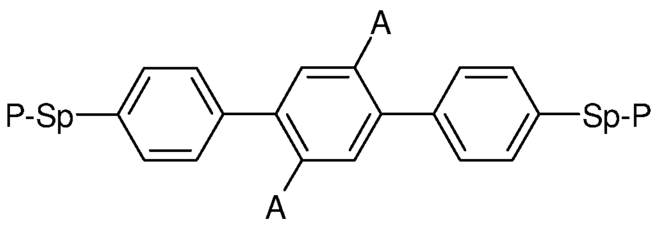

I2A-13-3

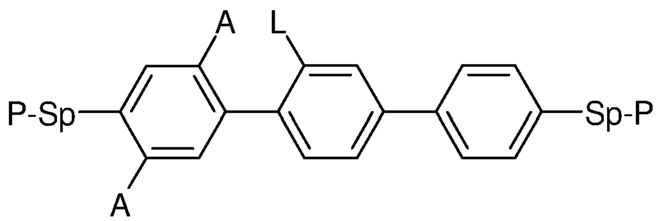

I2A-14-1

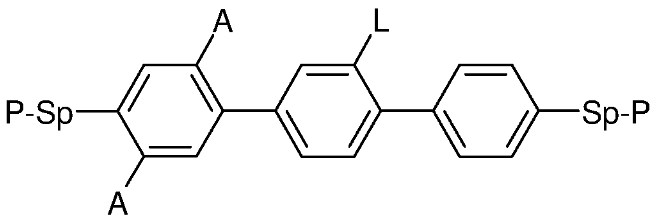

I2A-14-2

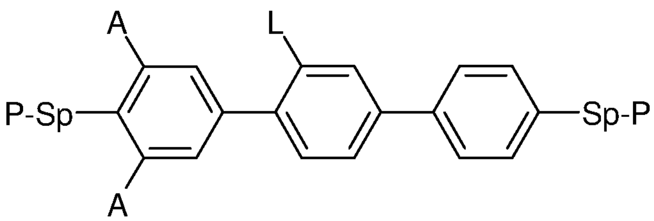

I2A-14-3

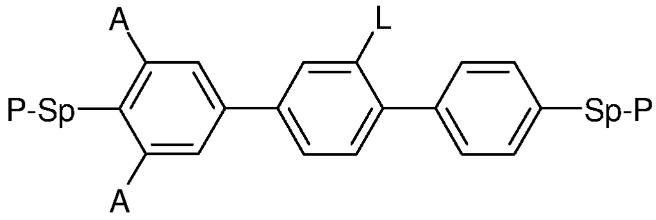

I2A-14-4

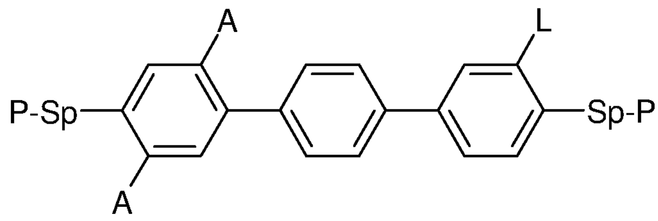

I2A-15-1

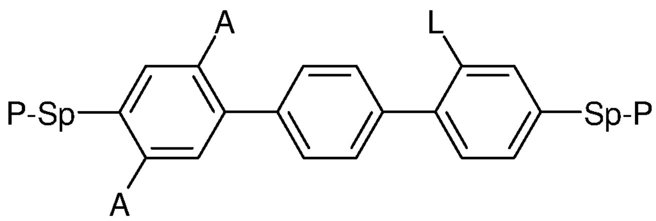

I2A-15-2

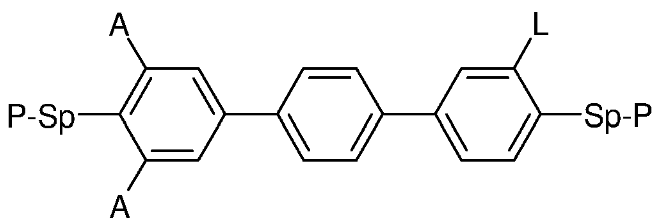

I2A-15-3

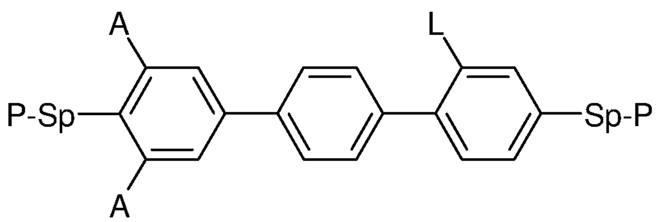

I2A-15-4

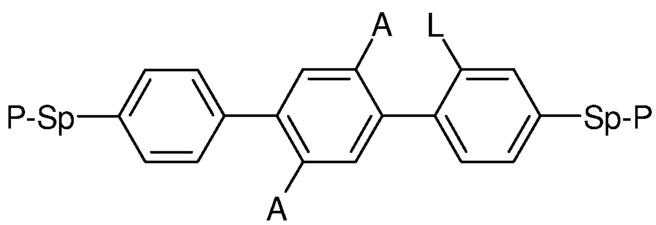

I2A-16-1

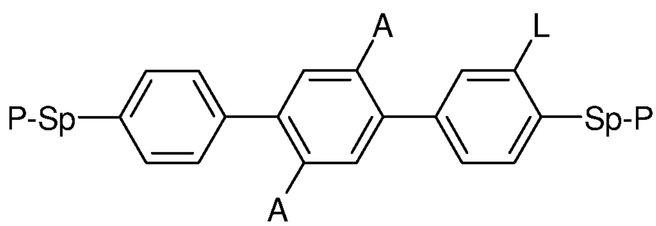

I2A-16-2

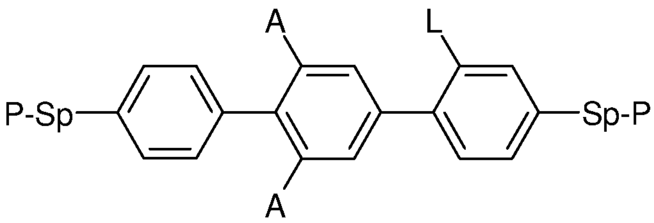

I2A-16-3

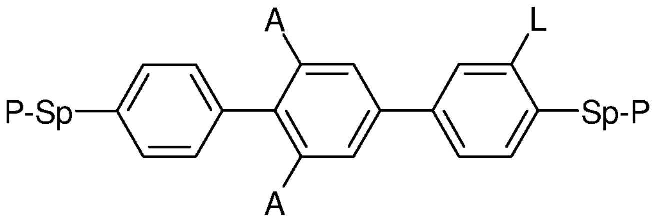

I2A-16-4

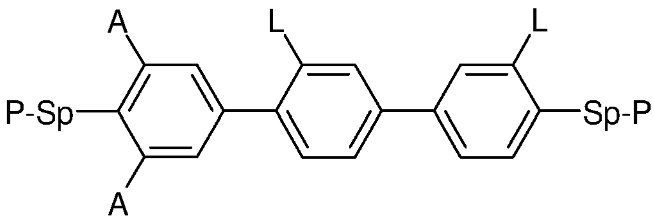

I2A-17-1

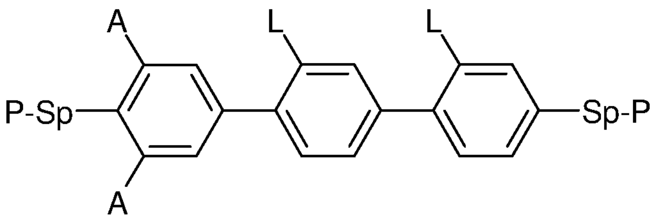

I2A-17-2

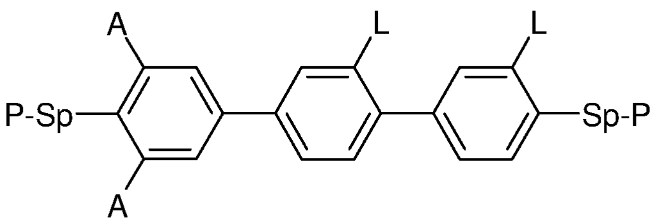

I2A-17-3

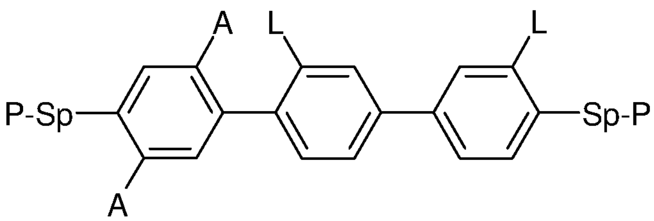

I2A-17-4

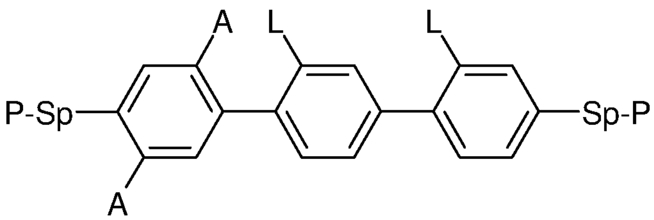

I2A-17-5

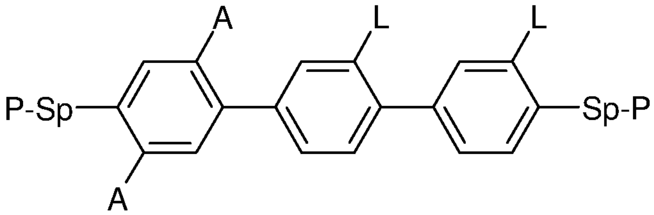

I2A-17-6

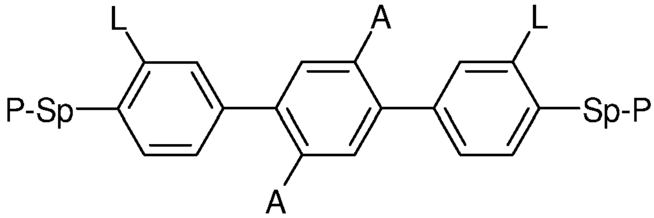

I2A-18-1

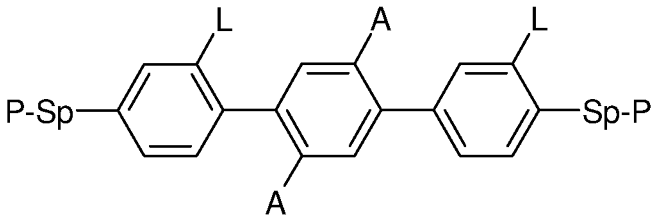

I2A-18-2

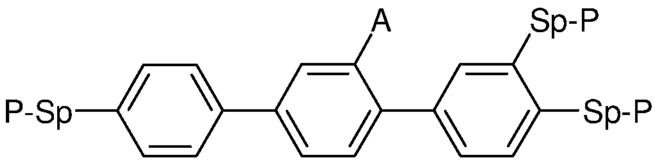

I2B-1-1

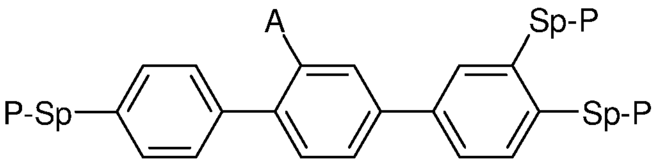

I2B-1-2

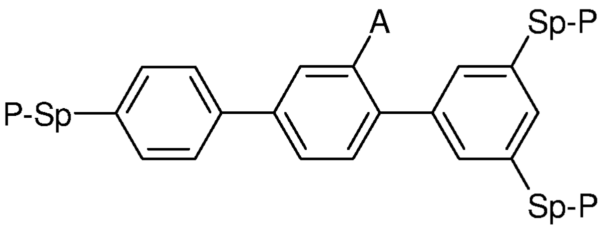

I2B-1-3

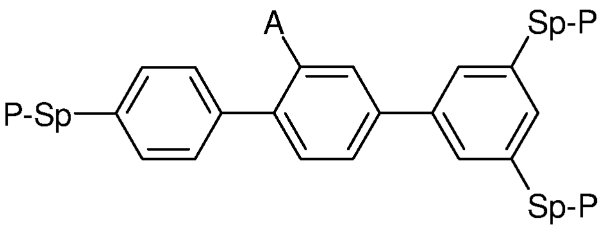

I2B-1-4

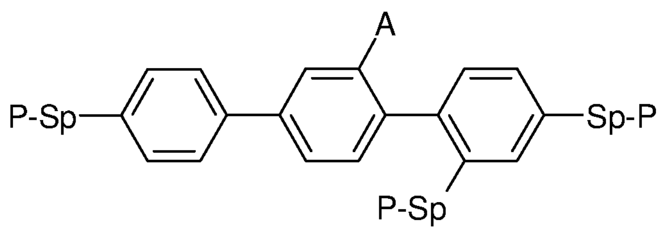

I2B-1-5

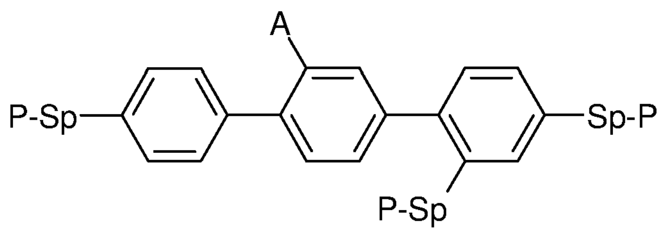

I2B-1-6

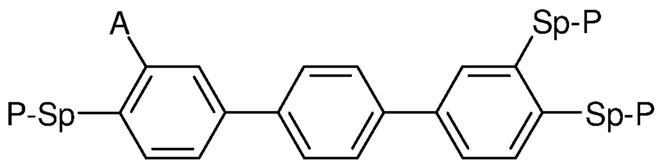

I2B-3-1

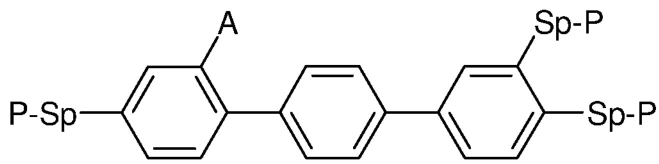

I2B-3-2

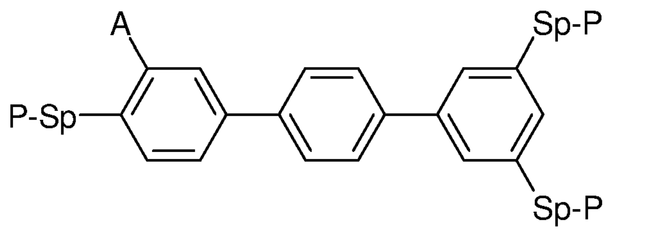

I2B-3-3

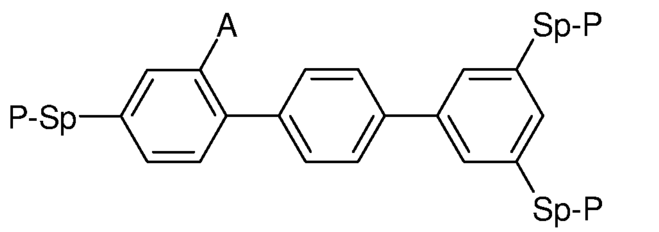

I2B-3-4

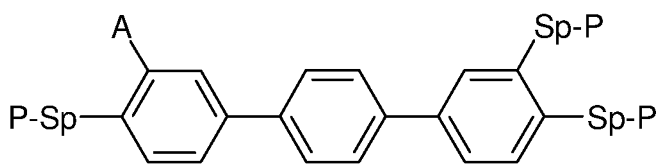

I2B-3-5

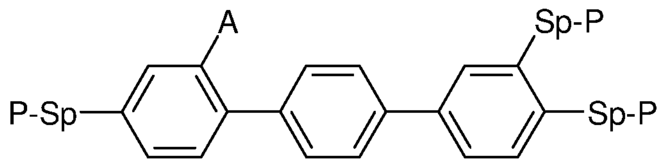

I2B-3-6

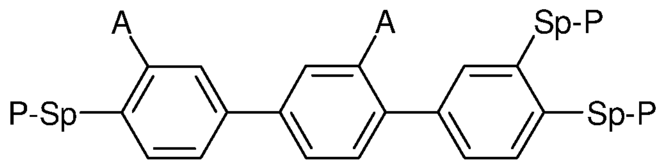

I2B-5-1

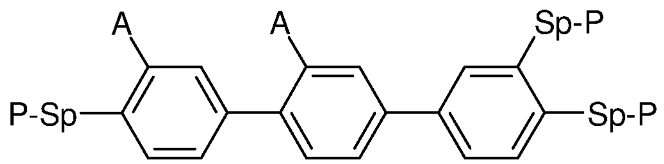

I2B-5-2

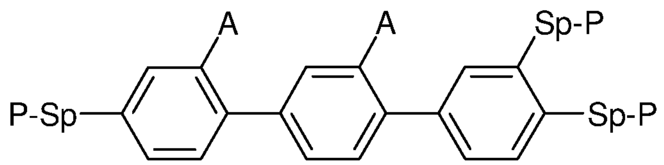

I2B-5-3

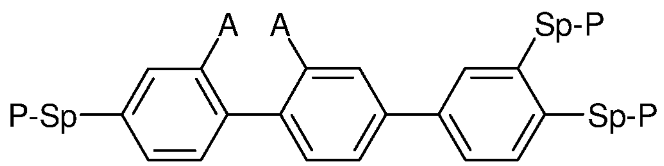

I2B-5-4

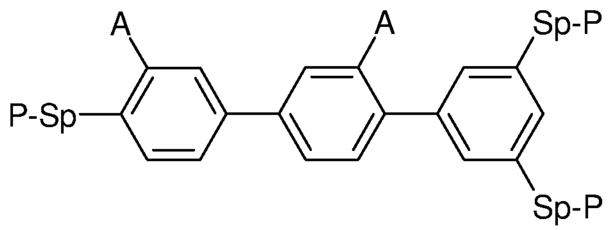

I2B-5-5

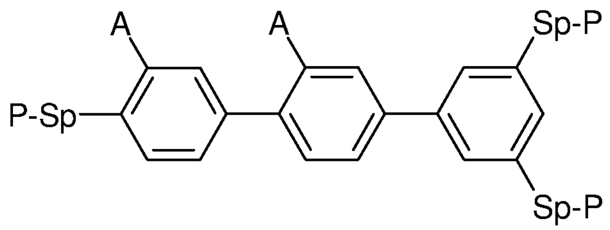

I2B-5-6

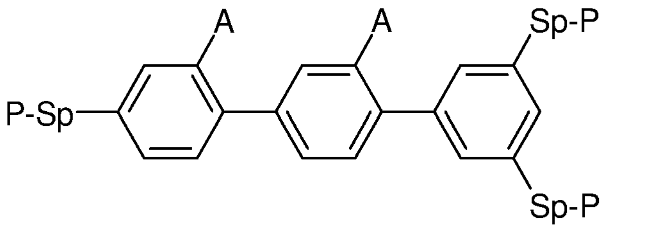

I2B-5-7

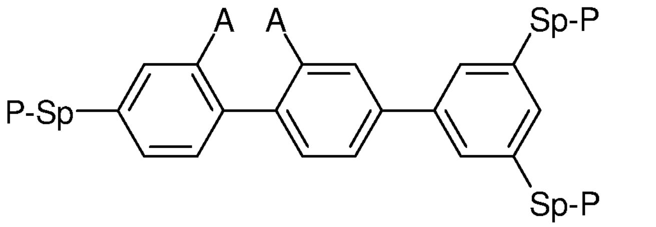

I2B-5-8

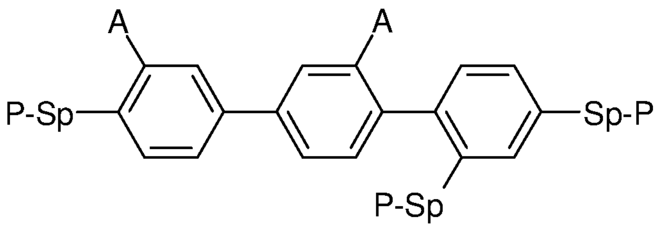

I2B-5-9

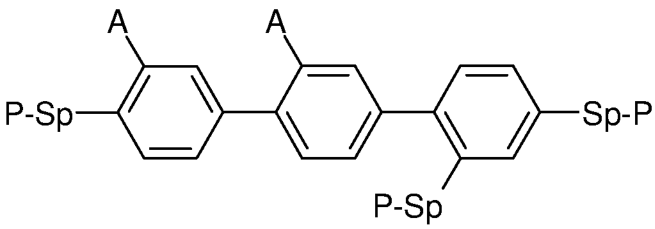

I2B-5-10

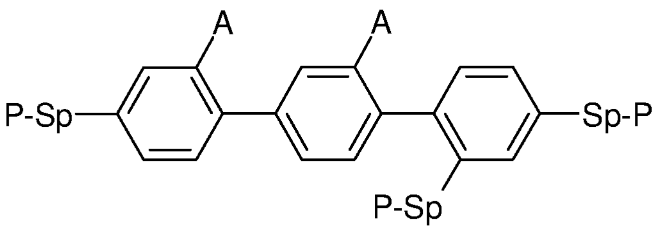

I2B-5-11

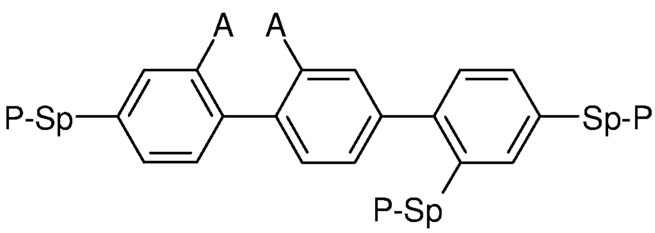

I2B-5-12

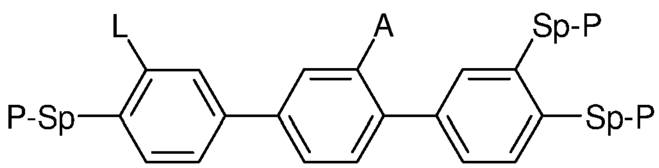

I2B-7-1

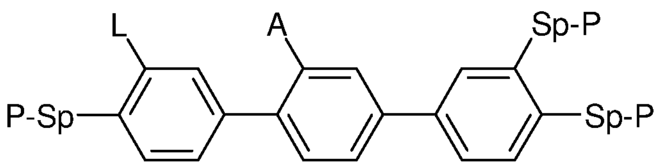

I2B-7-2

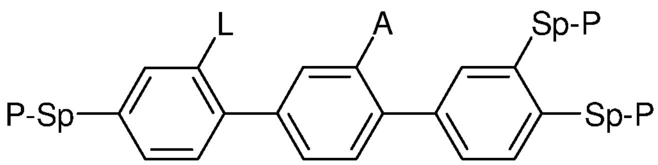

I2B-7-3

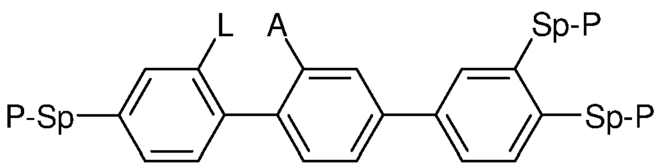

I2B-7-4

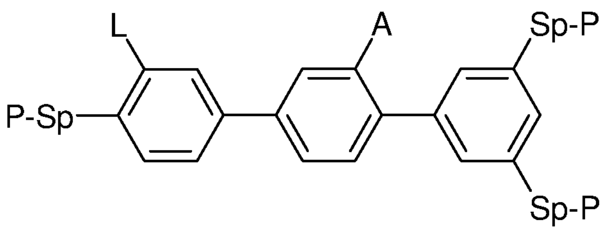

I2B-7-5

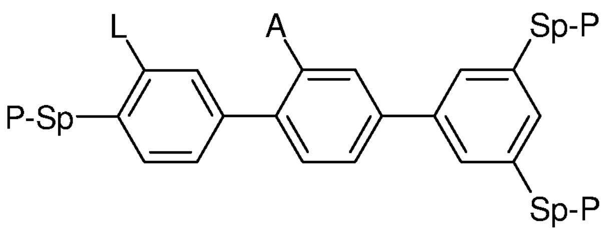

I2B-7-6

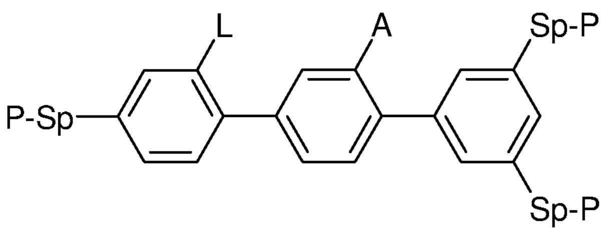

I2B-7-7

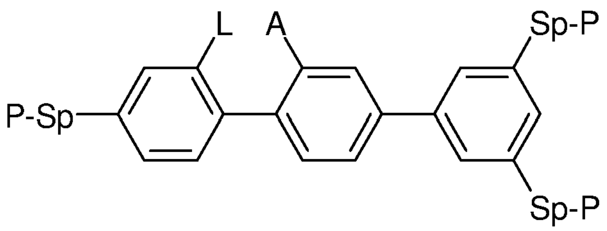

I2B-7-8

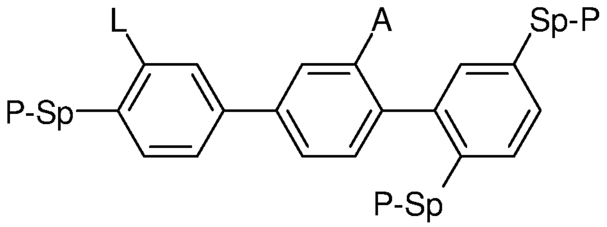

I2B-7-9

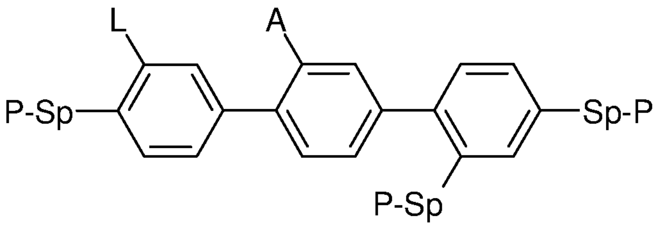

I2B-7-10

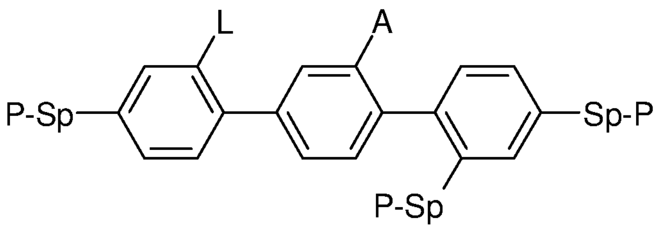

I2B-7-11

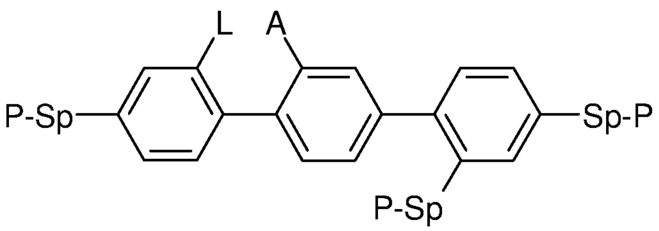

I2B-7-12

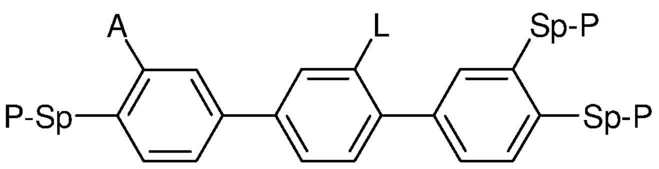

I2B-8-1

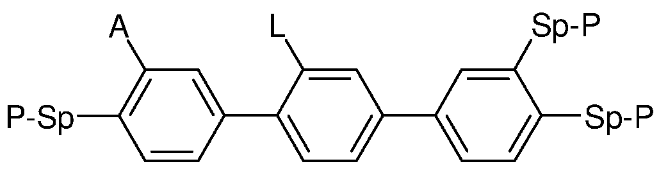

I2B-8-2

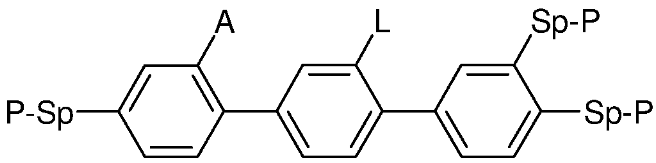

I2B-8-3

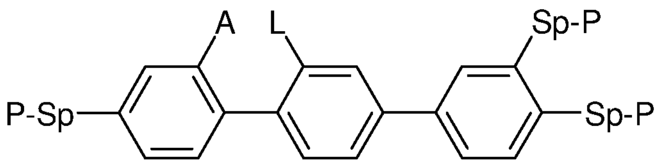

I2B-8-4

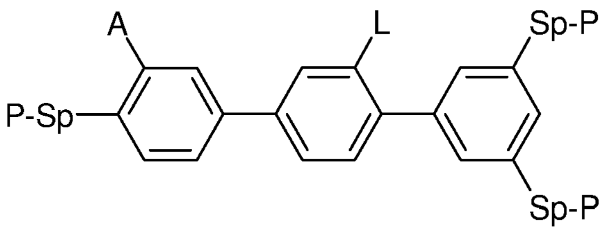

I2B-8-5

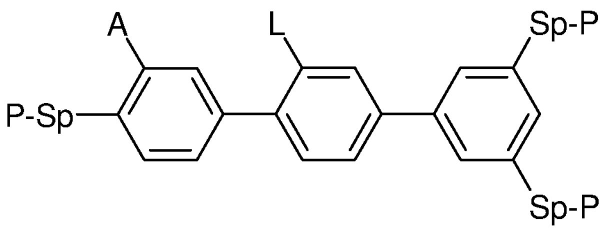

I2B-8-6

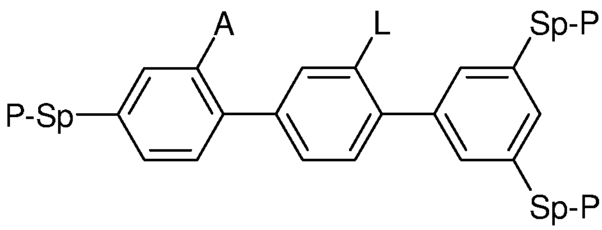

I2B-8-7

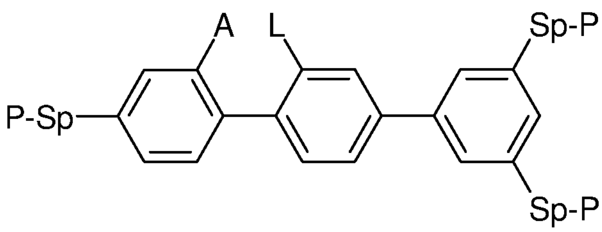

I2B-8-8

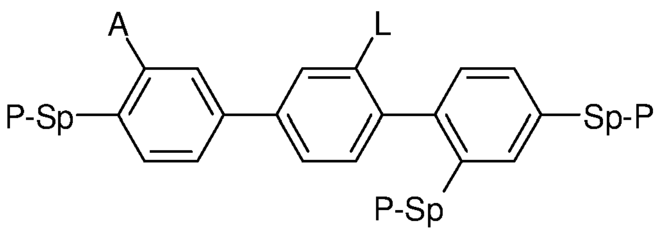

I2B-8-9

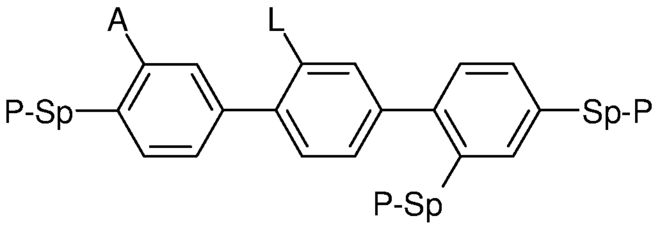

I2B-8-10

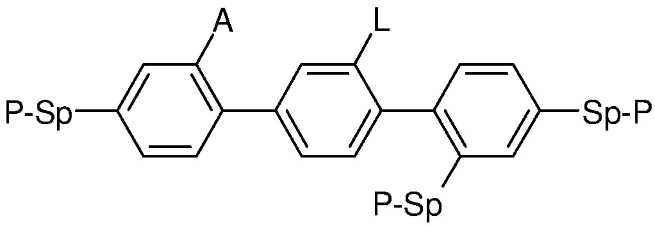

I2B-8-11

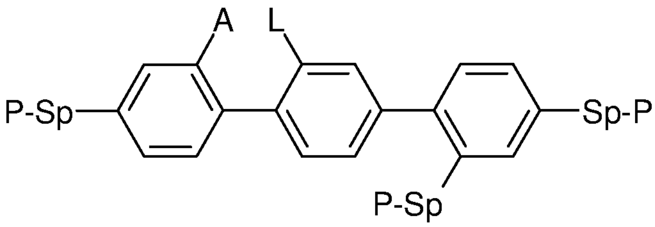

I2B-8-12

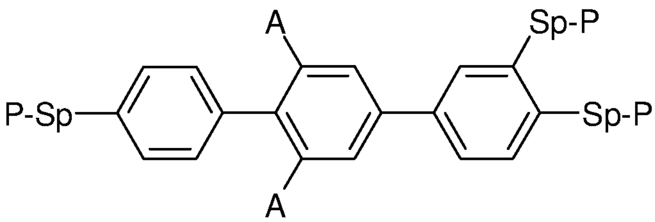

I2B-16-1

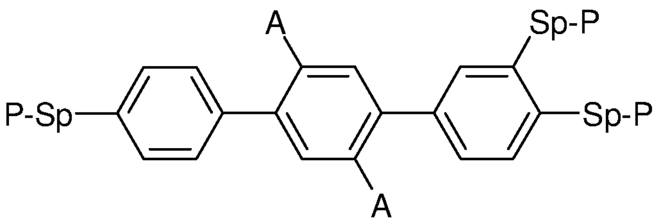

I2B-16-2

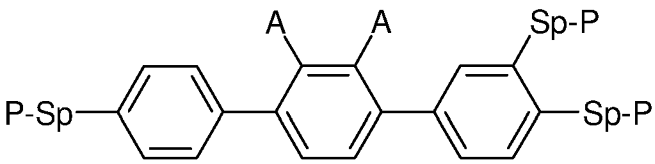

I2B-16-3

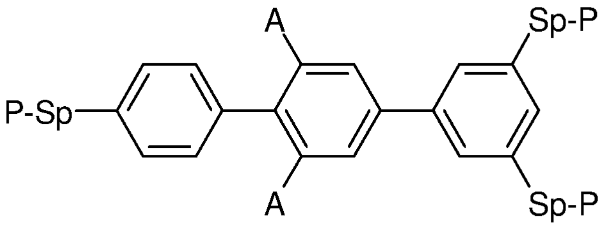

I2B-16-4

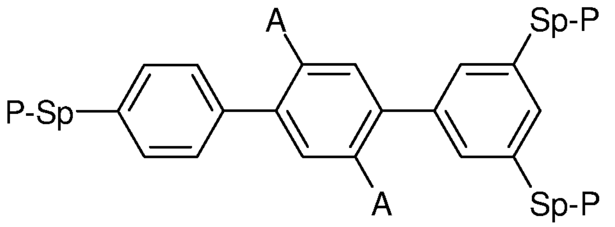

I2B-16-5

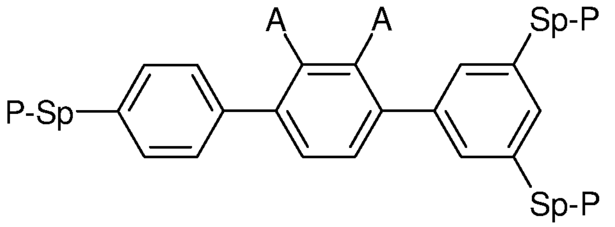

I2B-16-6

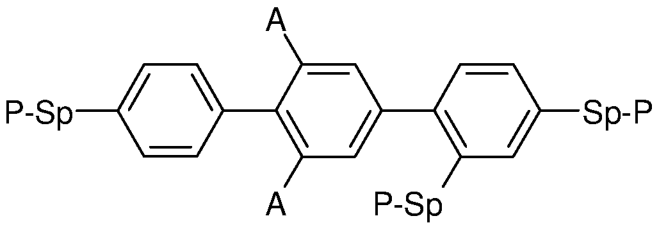

I2B-16-7

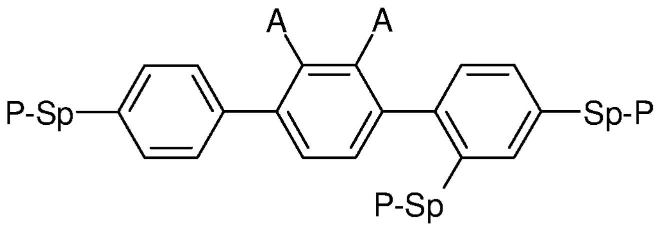

I2B-16-8

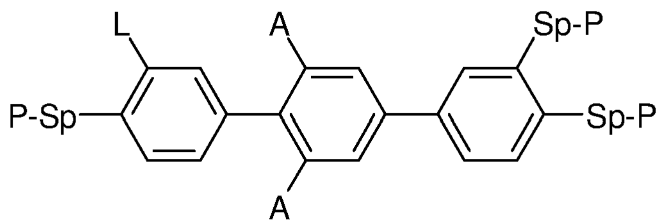

I2B-17-1

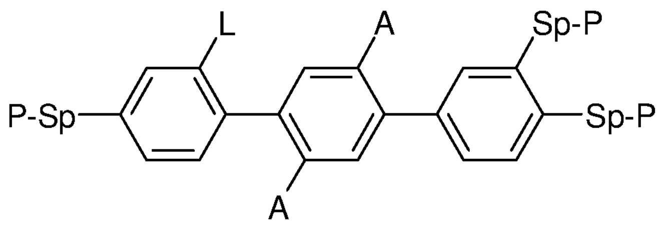

I2B-17-2

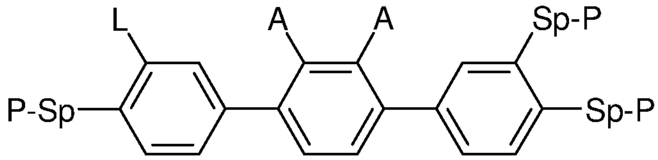

I2B-17-3

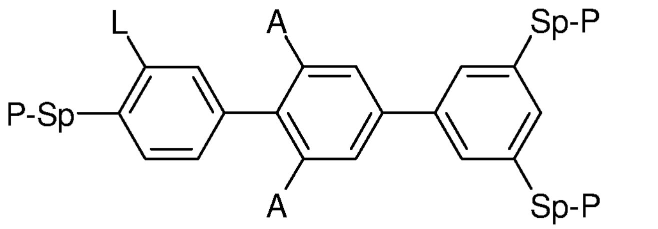

I2B-17-4

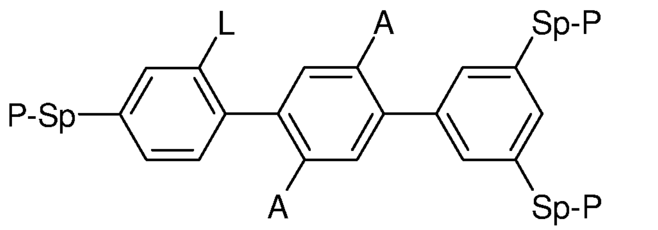

I2B-17-5

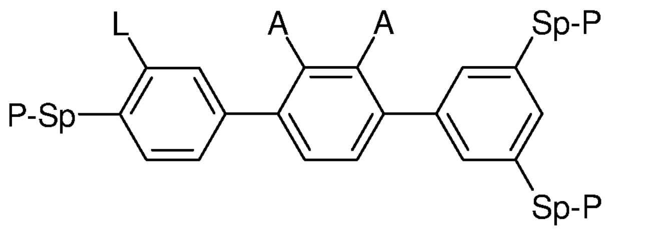

I2B-17-6

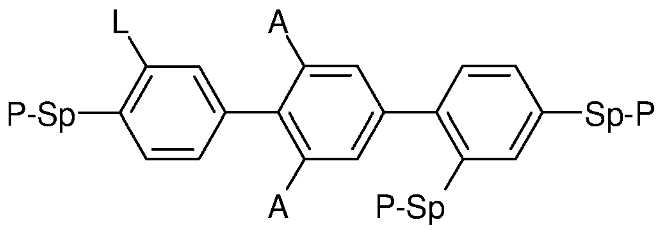

I2B-17-7

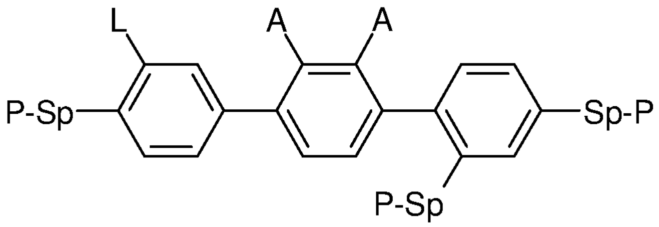

I2B-17-8

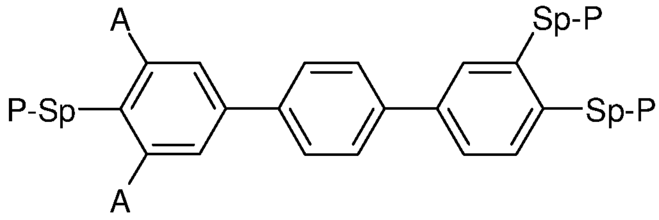

I2B-20-1

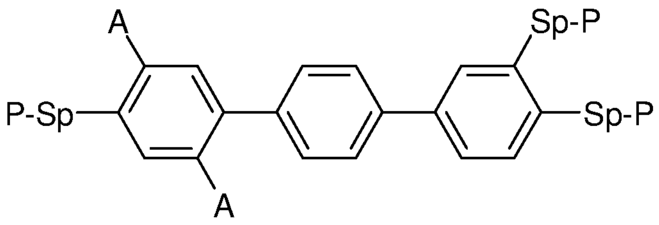

I2B-20-2

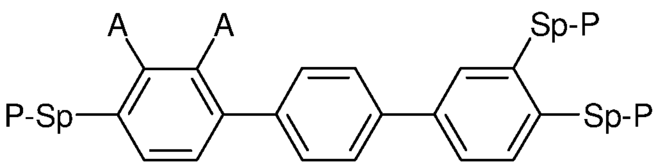

I2B-20-3

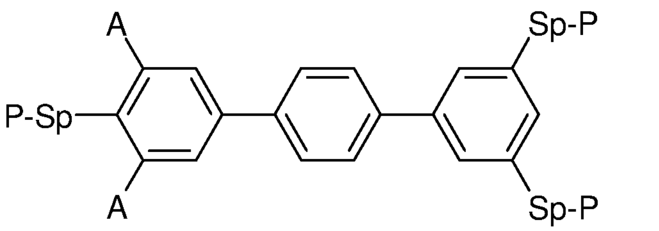

I2B-20-4

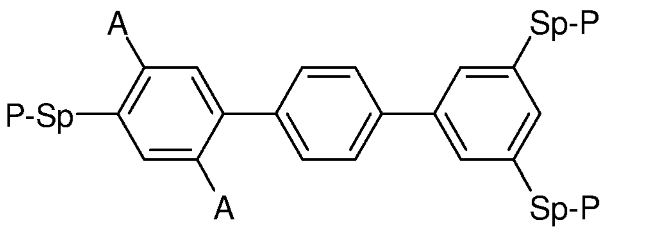

I2B-20-5

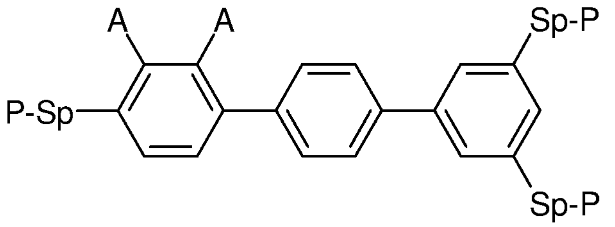

I2B-20-6

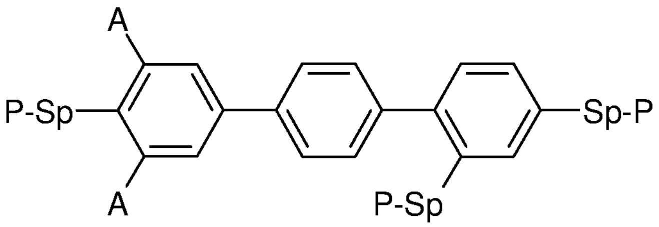

I2B-20-7

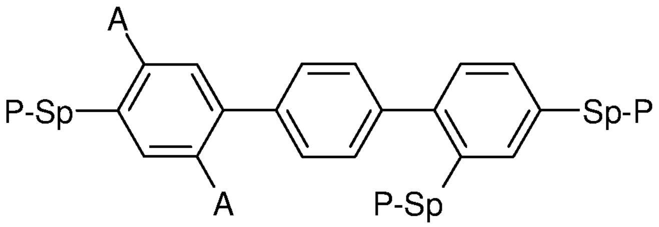

I2B-20-8

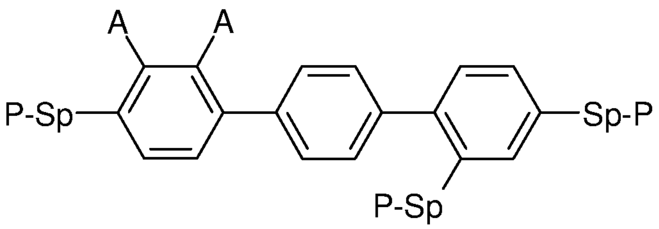

I2B-20-9

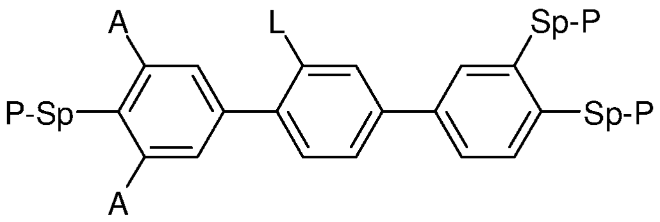

I2B-21-1

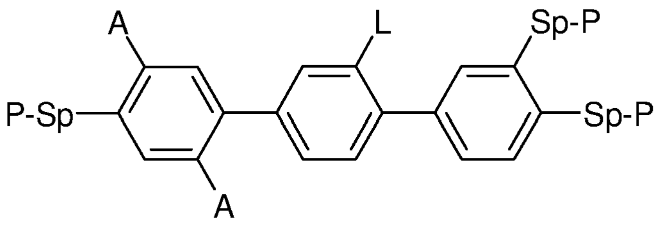

I2B-21-2

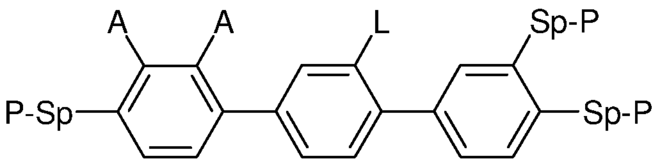

I2B-21-3

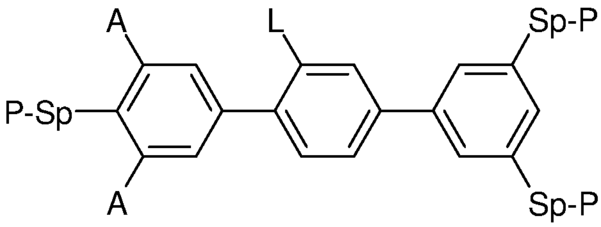

I2B-21-4

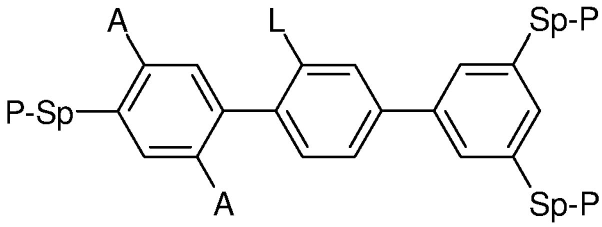

I2B-21-5

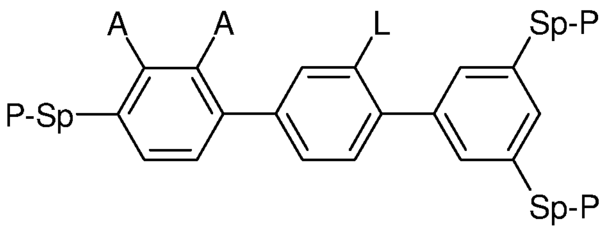

I2B-21-6

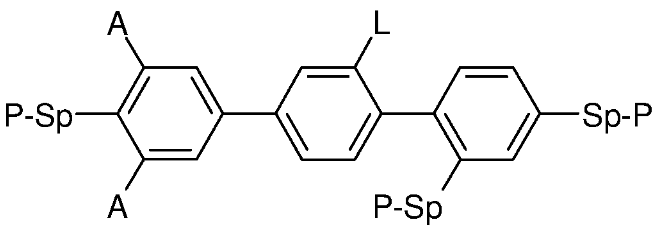

I2B-21-7

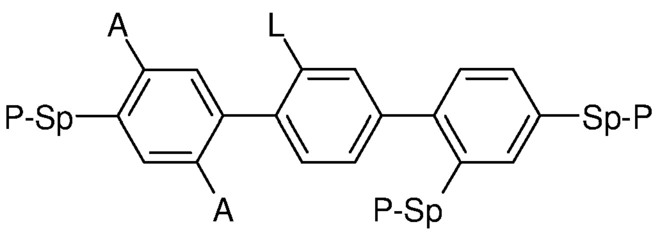

I2B-21-8

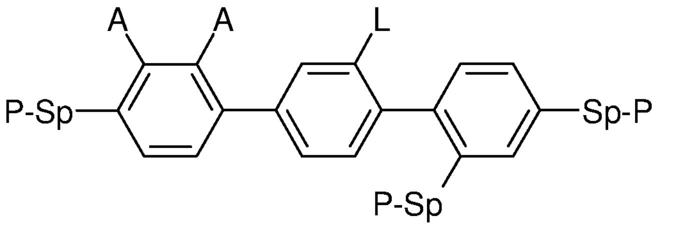

I2B-21-9

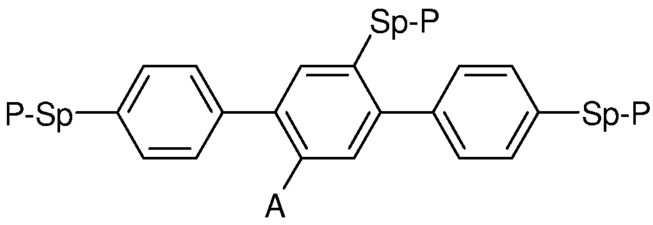

I2C-1-1

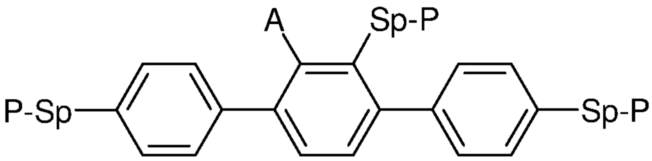

I2C-1-2

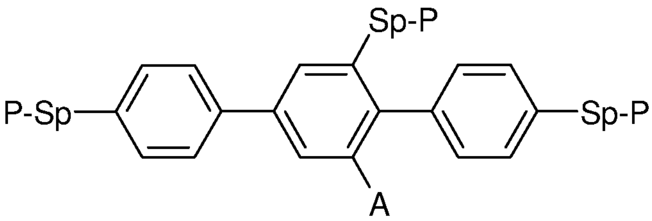

I2C-1-3

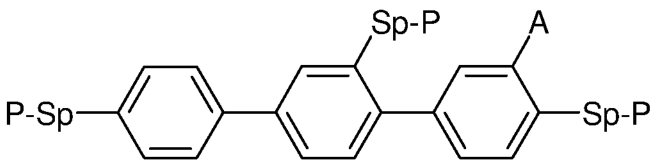

I2C-2-1

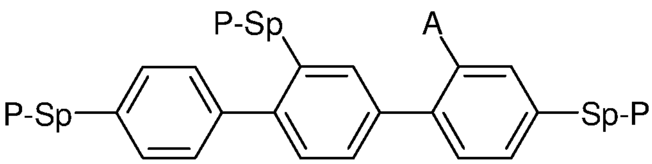

I2C-2-2

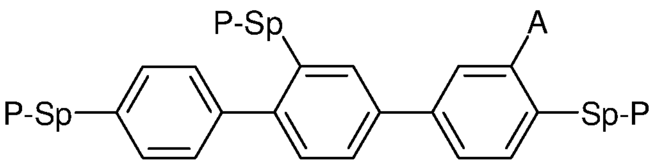

I2C-2-3

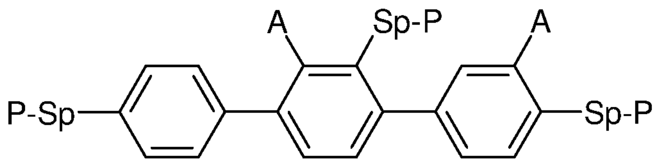

I2C-3-1

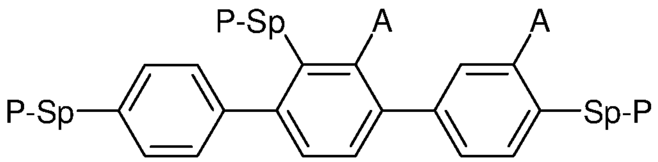

I2C-3-2

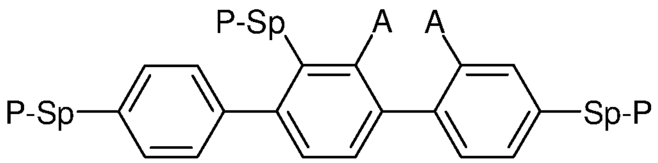

I2C-3-3

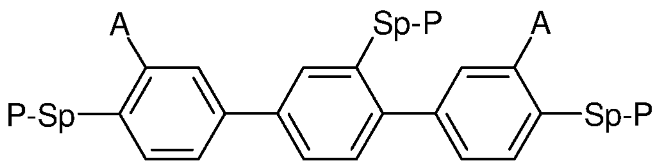

I2C-4-1

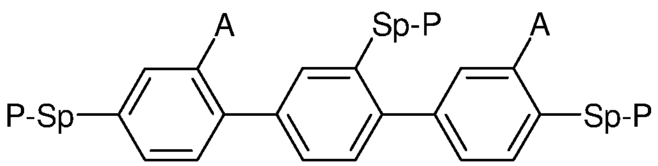

I2C-4-2

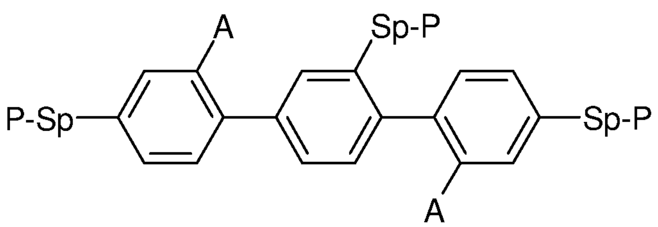

I2C-4-3

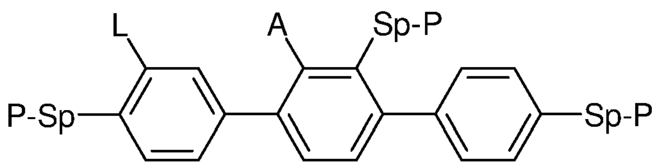

I2C-5-1

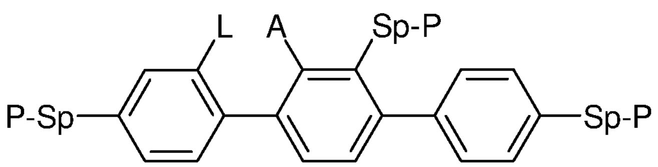

I2C-5-2

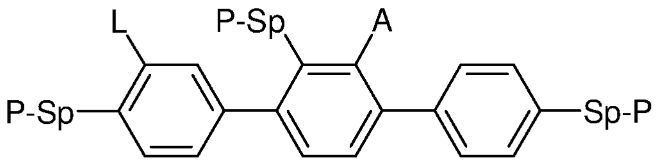

I2C-5-3

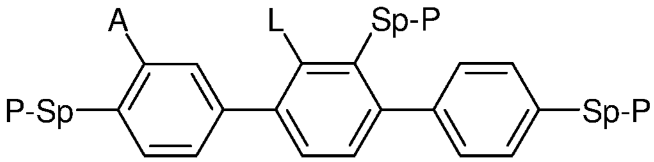

I2C-6-1

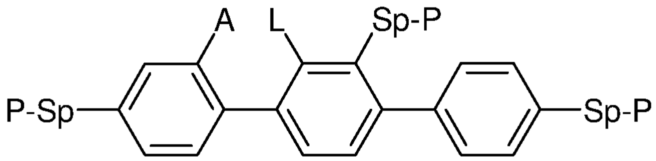

I2C-6-2

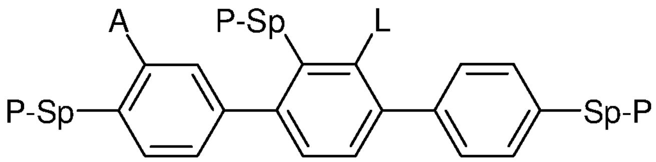

I2C-6-3

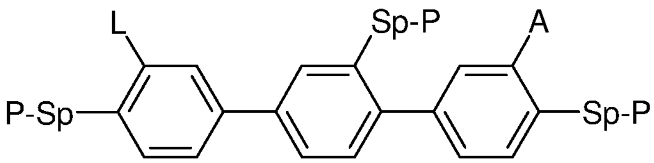

I2C-7-1

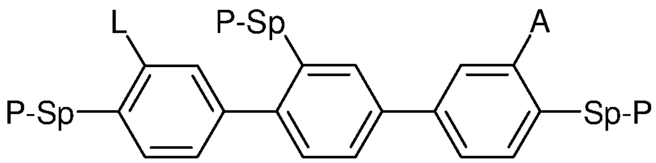

I2C-7-2

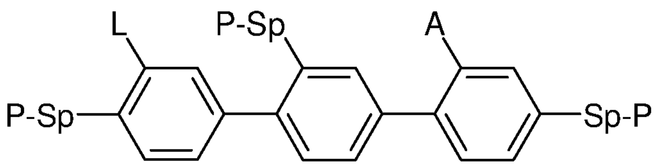

I2C-7-3

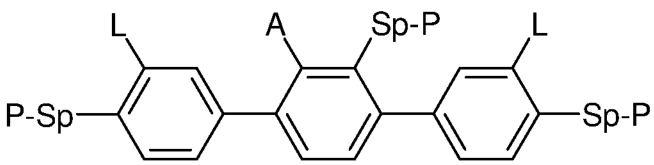

I2C-8-1

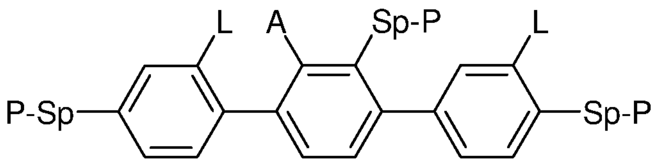

I2C-8-2

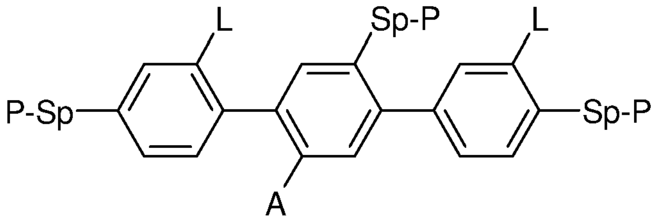

I2C-8-3

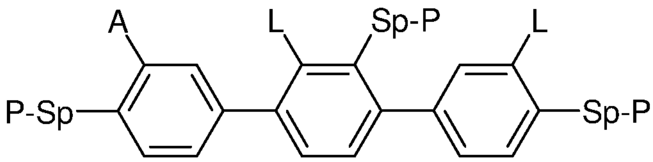

I2C-9-1

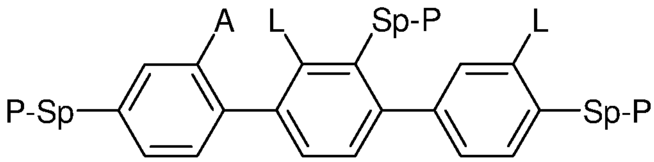

I2C-9-2

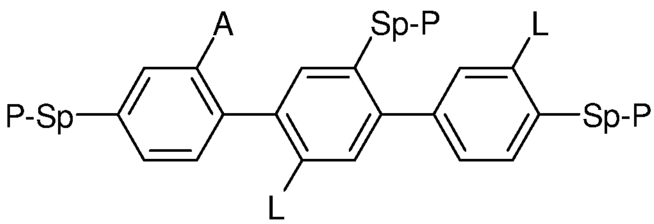

I2C-9-3

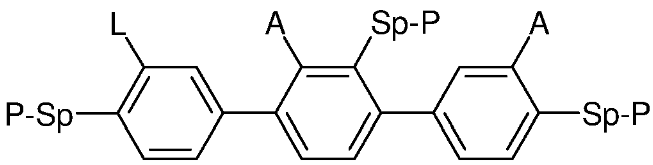

I2C-10-1

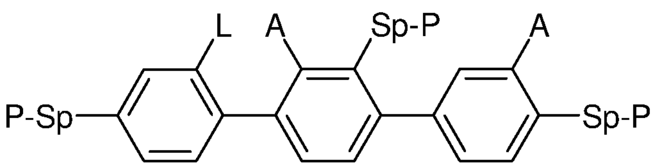

I2C-10-2

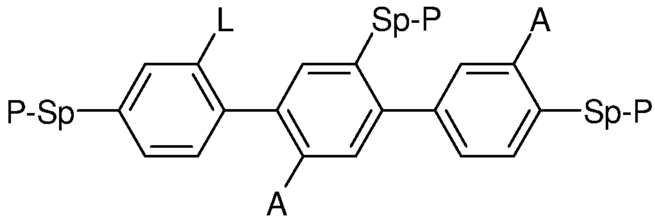

I2C-10-3

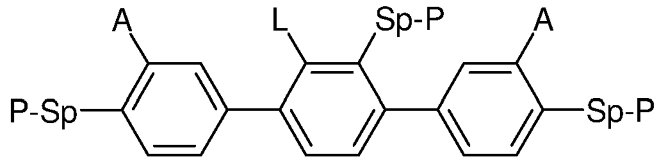

I2C-11-1

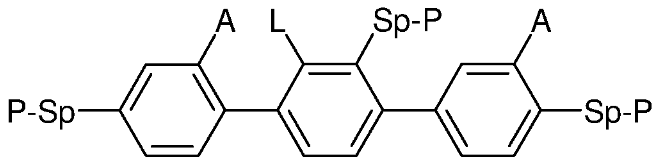

I2C-11-2

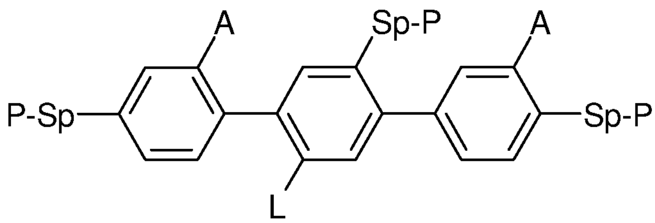

I2C-11-3

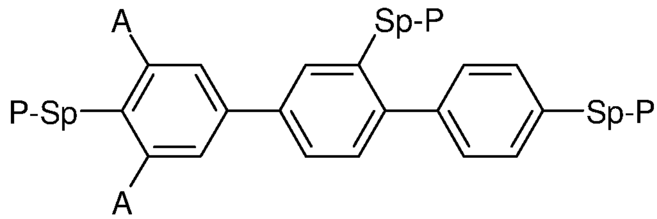

I2C-12-1

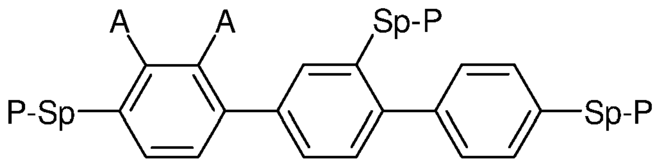

I2C-12-2

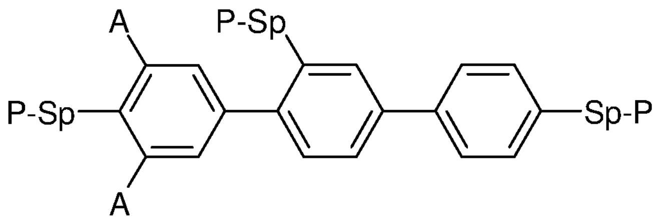

I2C-12-3

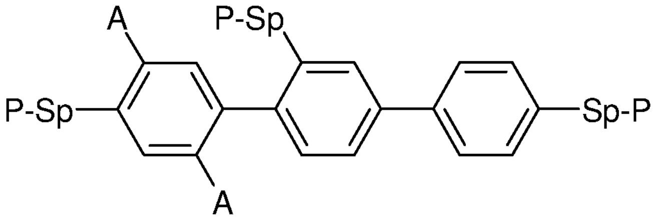

I2C-12-4

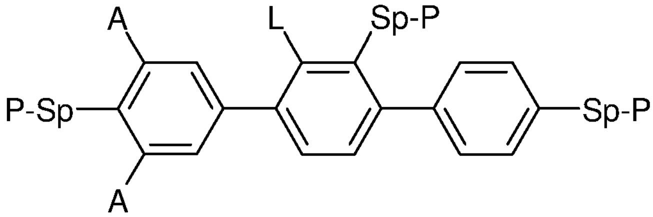

I2C-13-1

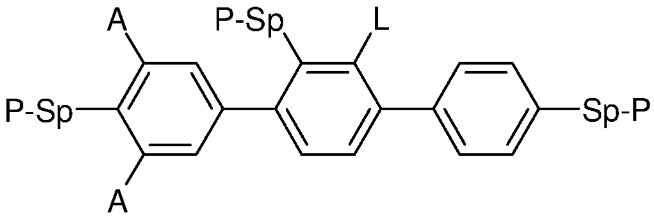

I2C-13-2

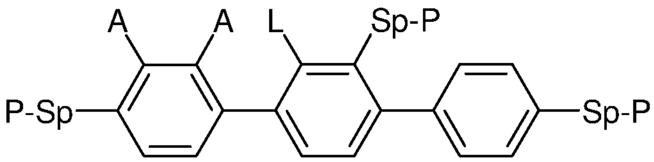

I2C-13-3

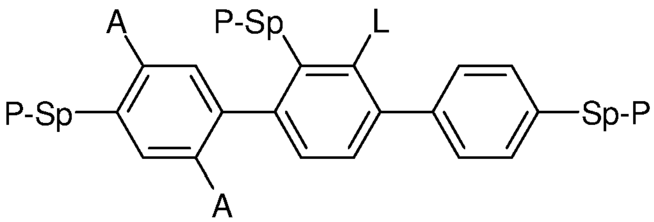

I2C-13-4

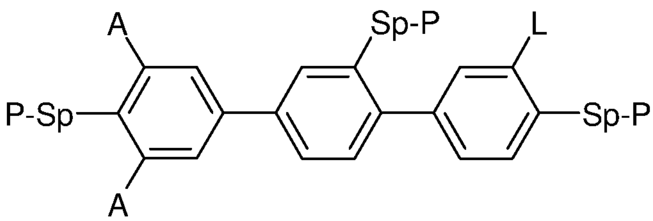

I2C-14-1

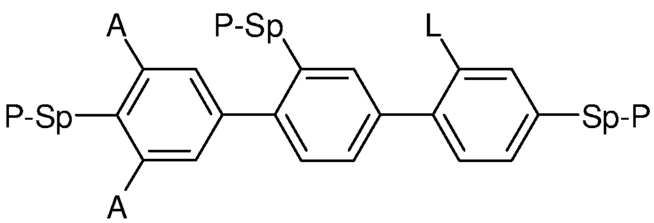

I2C-14-2

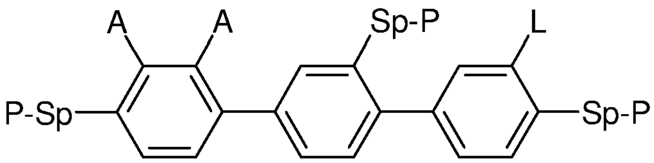

I2C-14-3

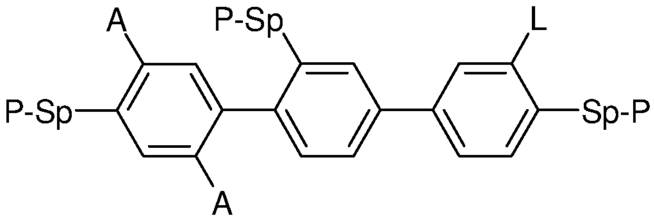

I2C-14-4

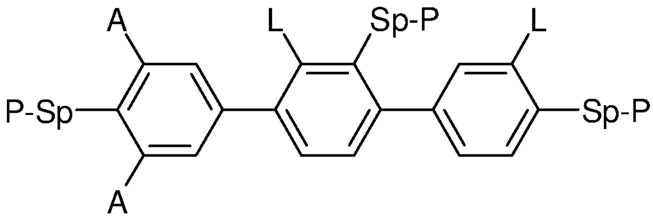

I2C-15-1

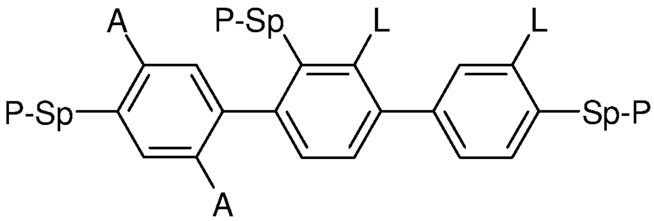

I2C-15-2

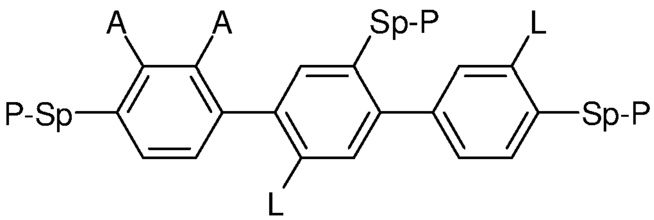

I2C-15-3

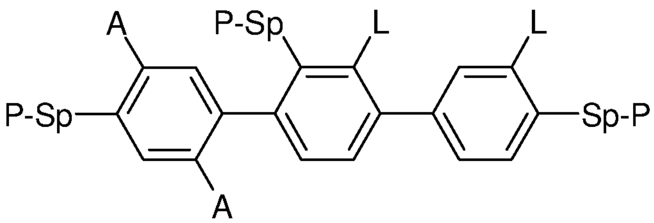

I2C-15-4

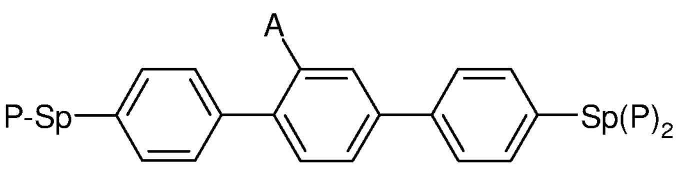

I2D-1-1

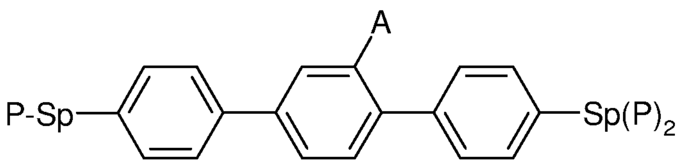

I2D-1-2

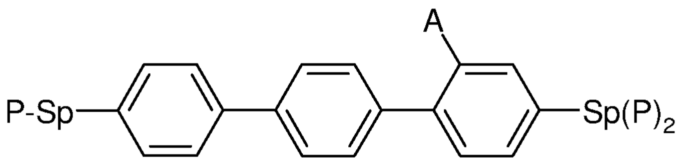

I2D-2-1

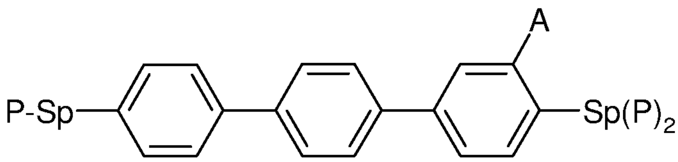

I2D-2-2

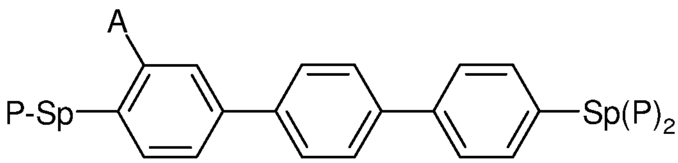

I2D-3-1

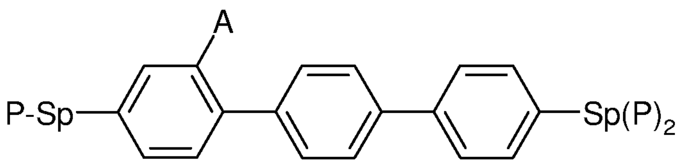

I2D-3-2

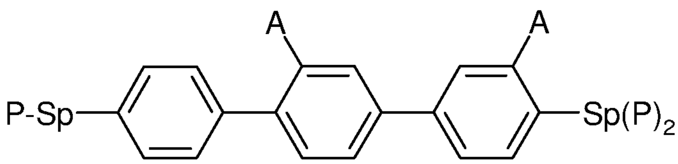

I2D-4-1

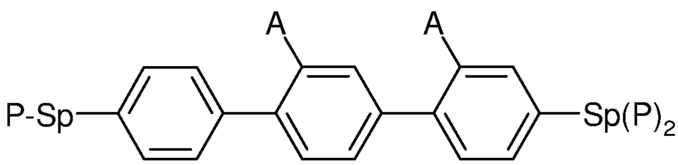

I2D-4-2

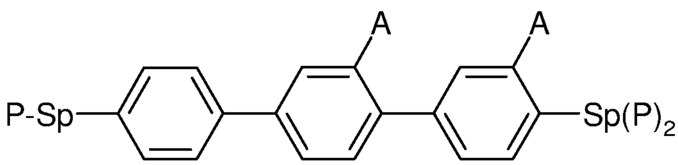

I2D-4-3

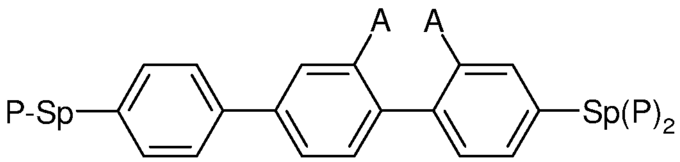

I2D-4-4

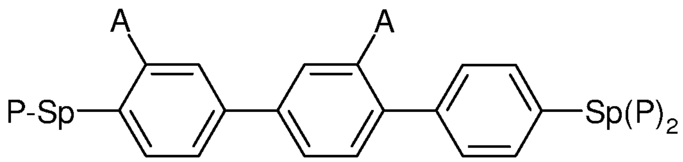

I2D-5-1

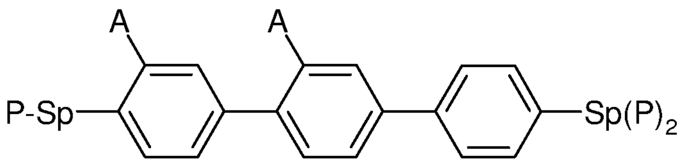

I2D-5-2

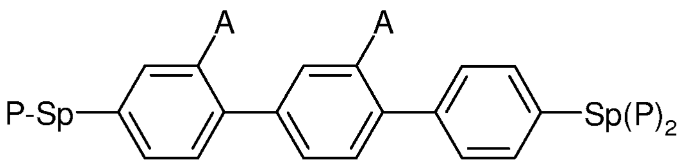

I2D-5-3

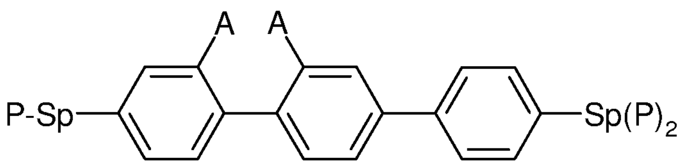

I2D-5-4

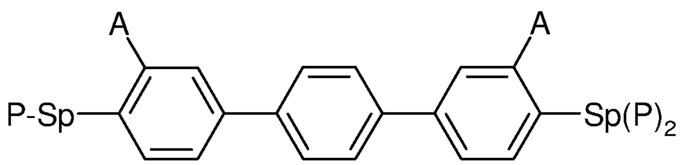

I2D-6-1

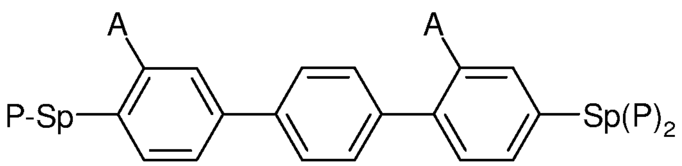

I2D-6-2

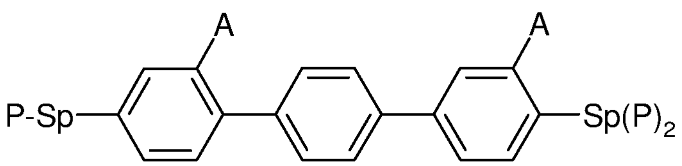

I2D-6-3

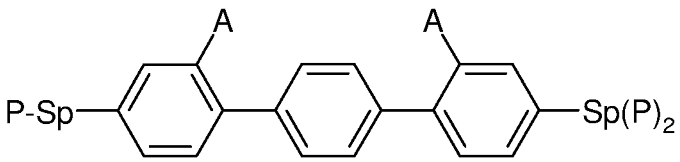

I2D-6-4

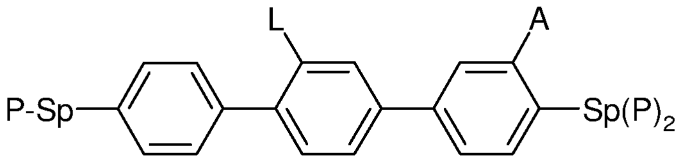

I2D-7-1

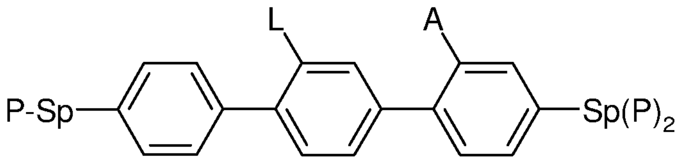

I2D-7-2

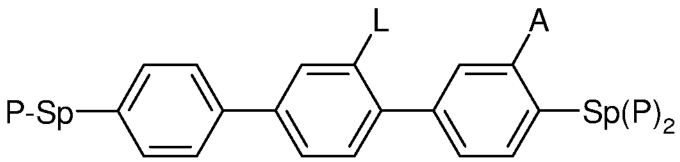

I2D-7-3

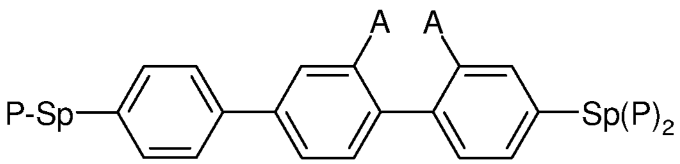

I2D-7-4

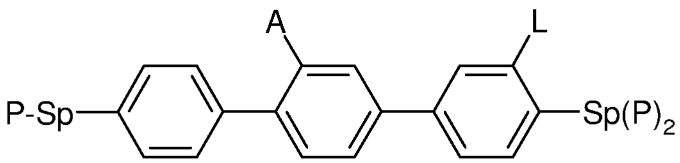

I2D-8-1

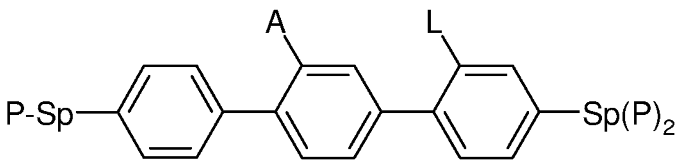

I2D-8-2

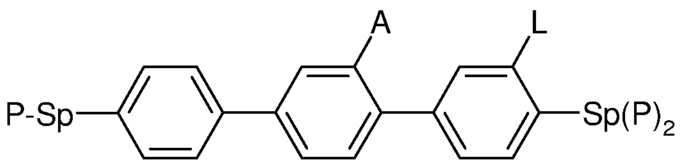

I2D-8-3

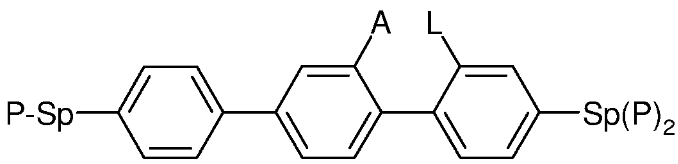

I2D-8-4

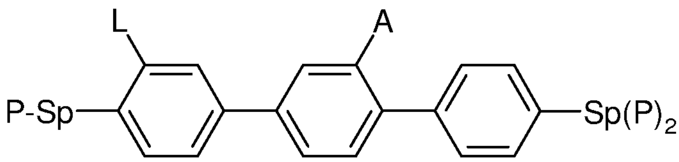

I2D-9-1

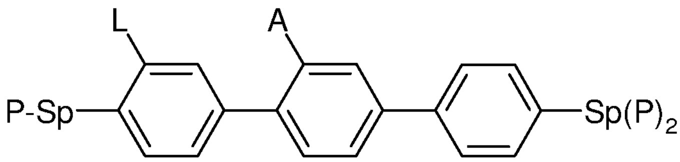

I2D-9-2

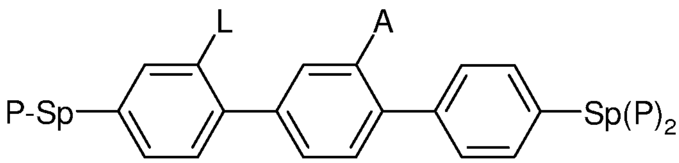

I2D-9-3

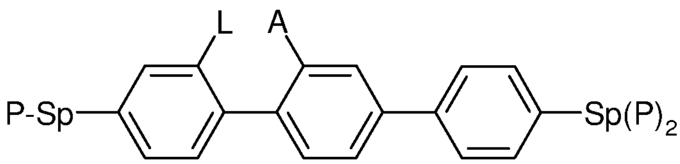

I2D-9-4

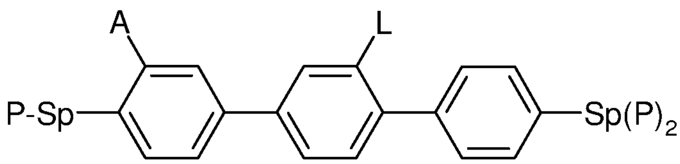

I2D-10-1

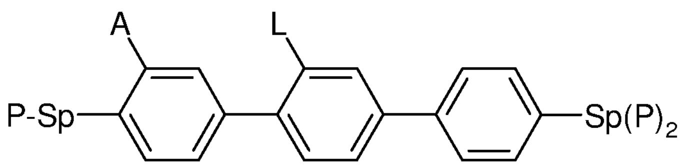

I2D-10-2

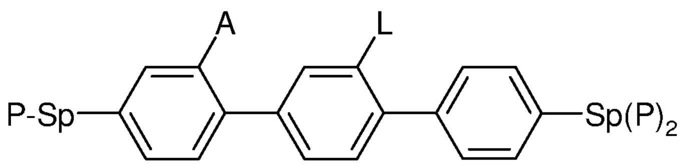

I2D-10-3

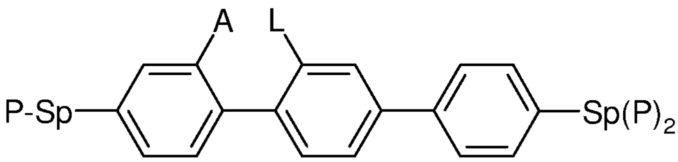

I2D-10-4

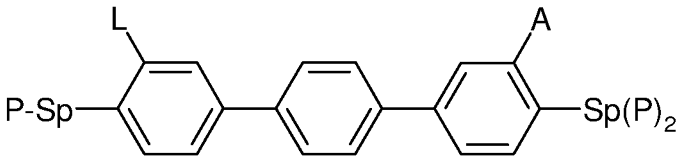

I2D-11-1

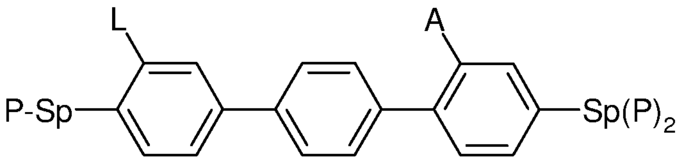

I2D-11-2

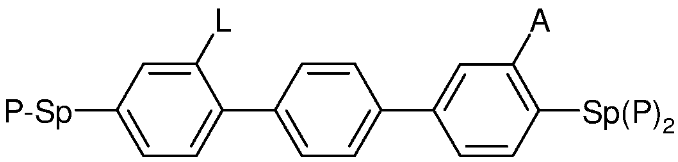

I2D-11-3

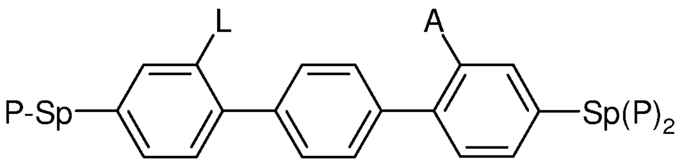

I2D-11-4

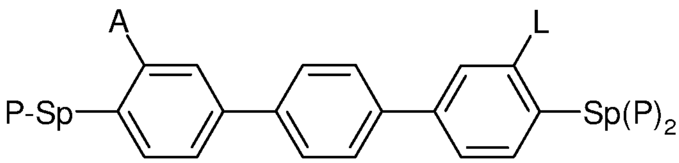

I2D-12-1

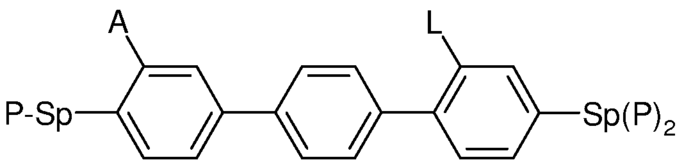

I2D-12-2

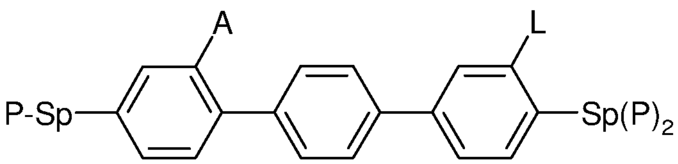

I2D-12-3

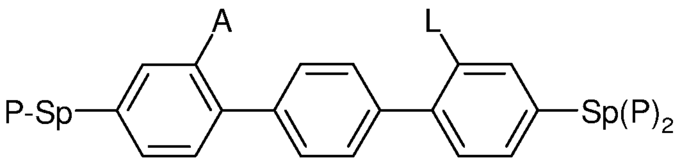

I2D-12-4

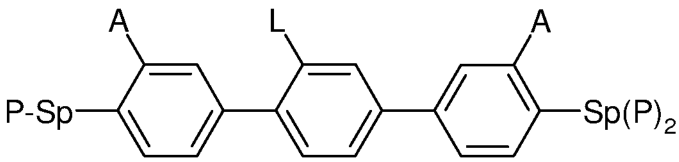

I2D-13-1

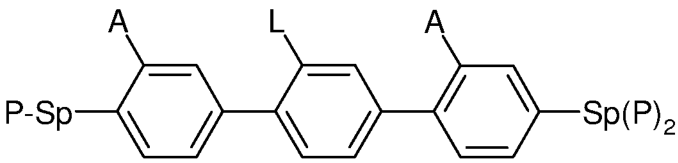

I2D-13-2

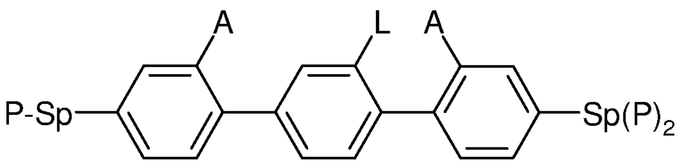

I2D-13-3

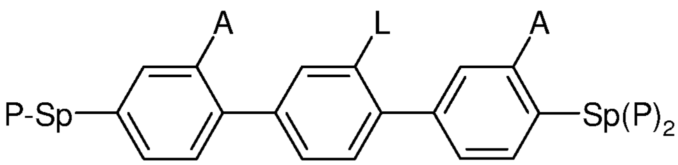

I2D-13-4

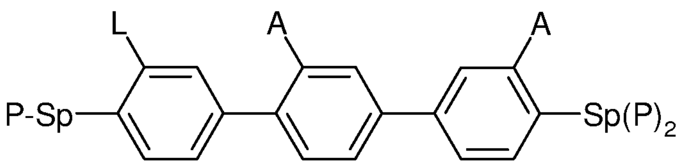

I2D-14-1

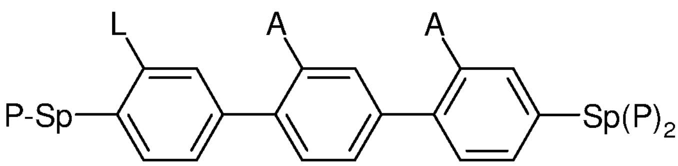

I2D-14-2

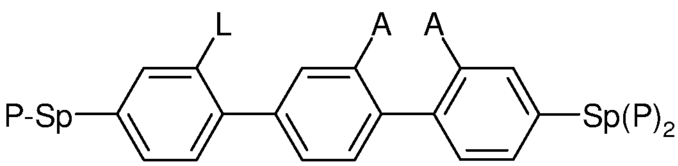

I2D-14-3

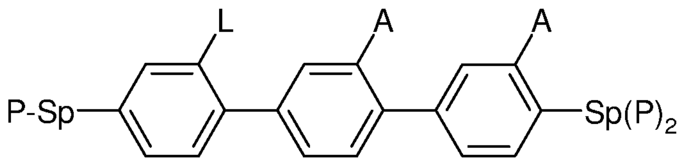

I2D-14-4

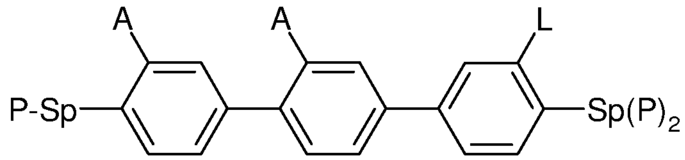

I2D-15-1

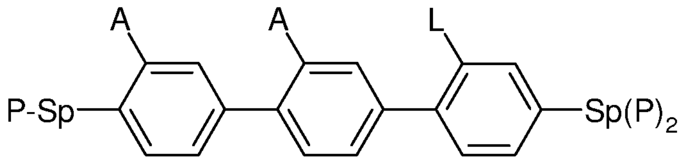

I2D-15-2

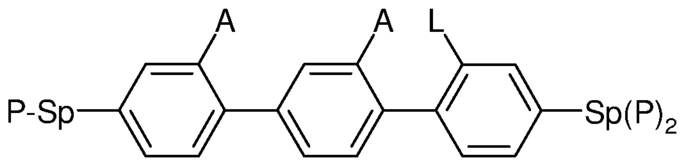

I2D-15-3

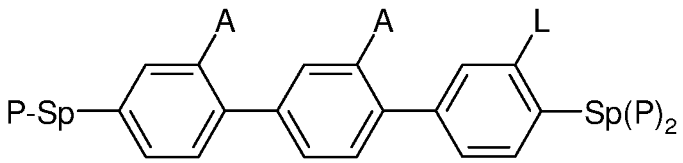

I2D-15-4

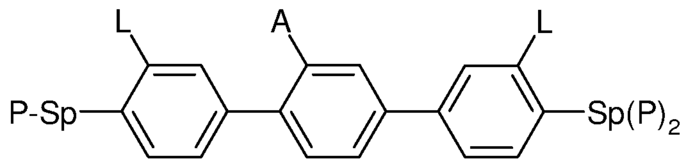

I2D-16-1

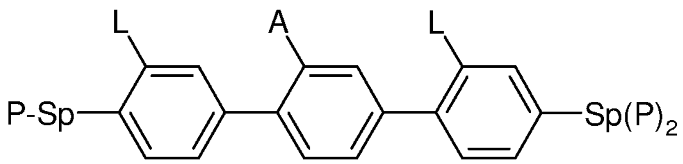

I2D-16-2

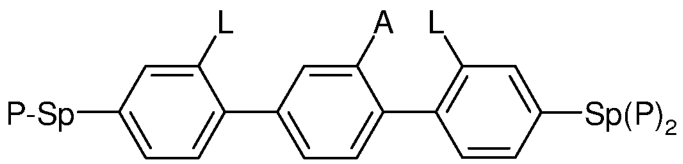

I2D-16-3

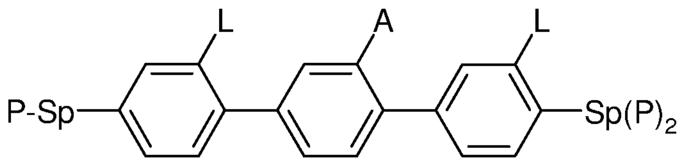

I2D-16-4

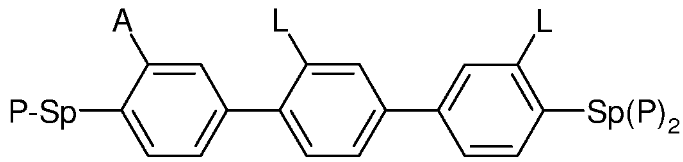

I2D-17-1

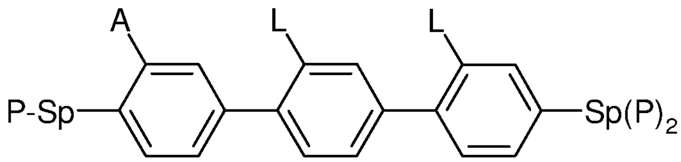

I2D-17-2

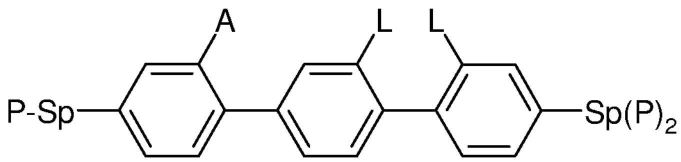

I2D-17-3

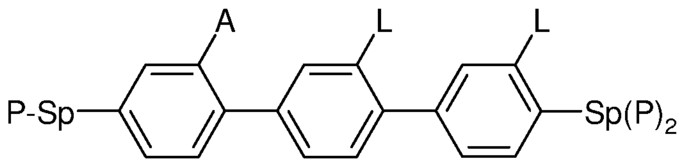

I2D-17-4

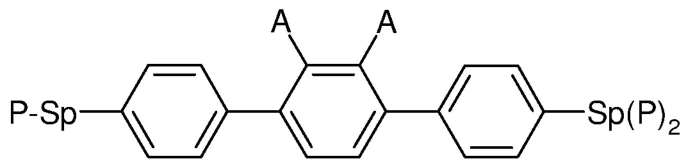

I2D-19-1

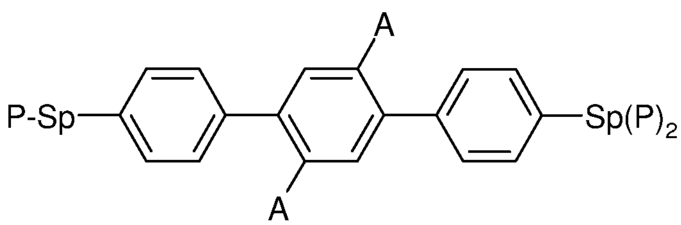

I2D-19-2

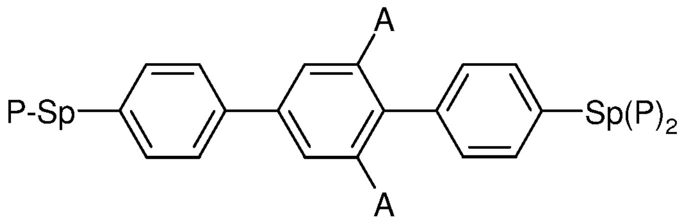

I2D-19-3

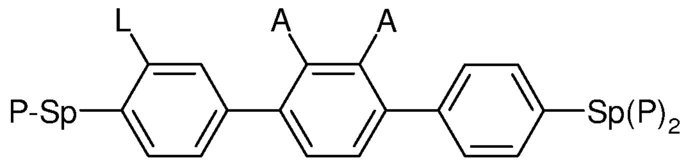

I2D-20-1

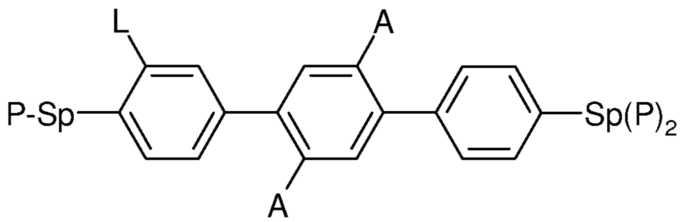

I2D-20-2

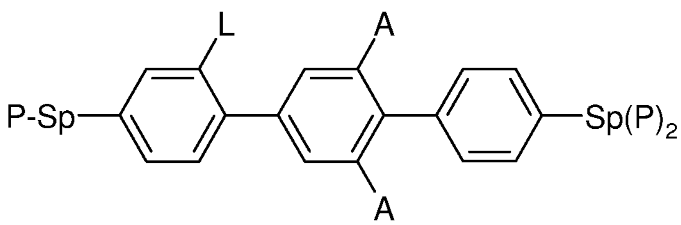

I2D-20-3

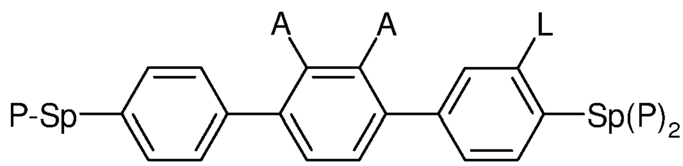

I2D-21-1

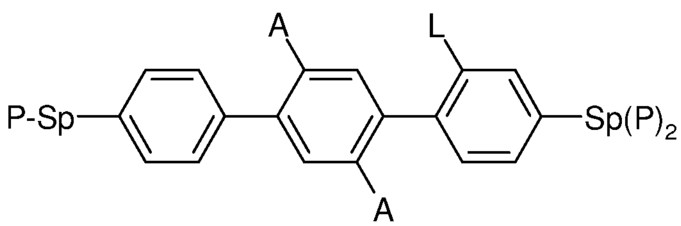

I2D-21-2

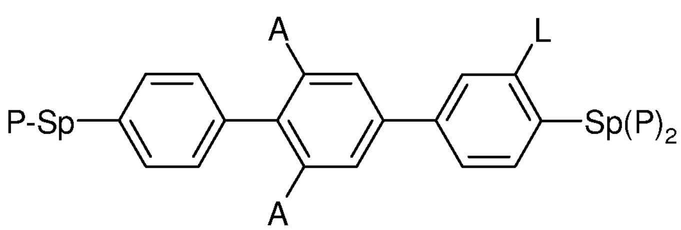

I2D-21-3

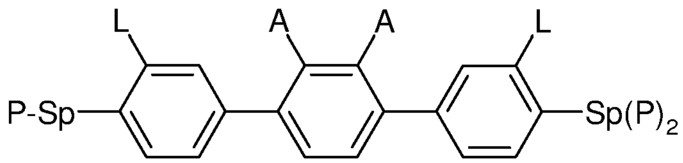

I2D-22-1

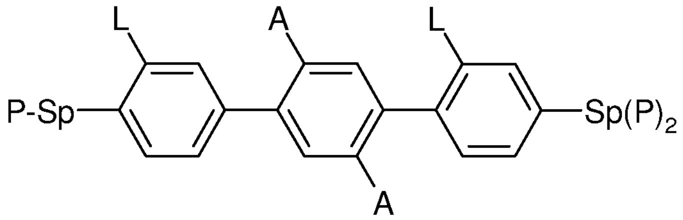

I2D-22-2

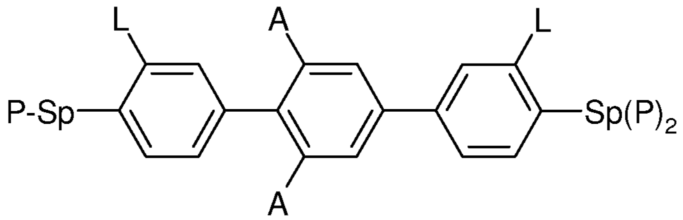

I2D-22-3

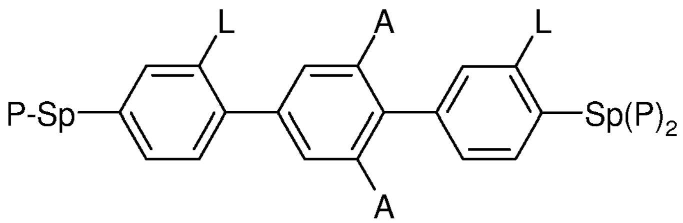

I2D-22-4

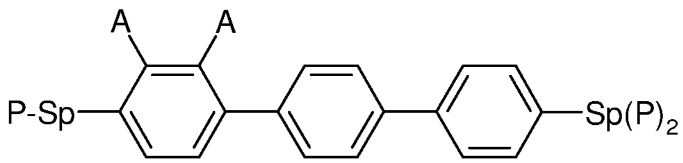

I2D-23-1

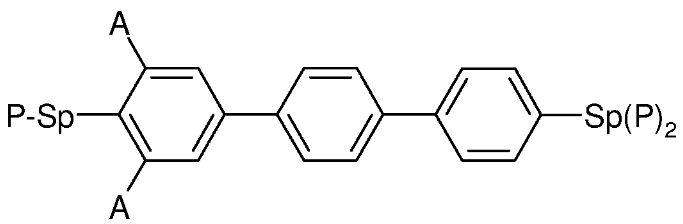

I2D-23-2

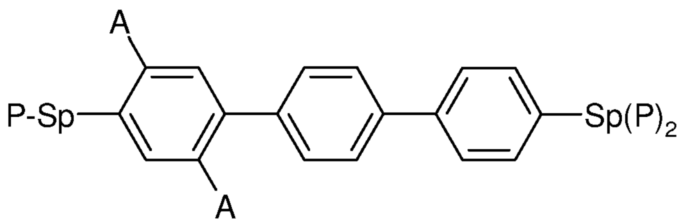

I2D-23-3

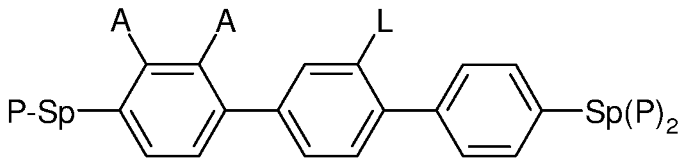

I2D-24-1

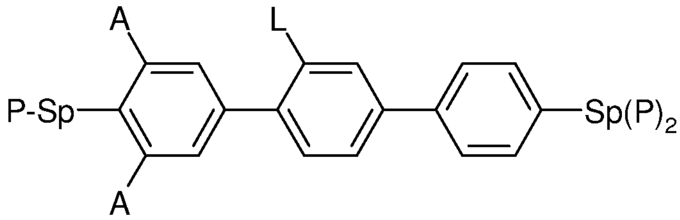

I2D-24-2

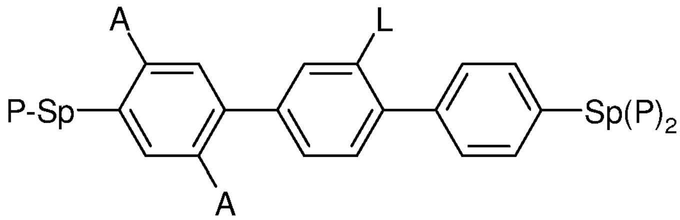

I2D-24-3

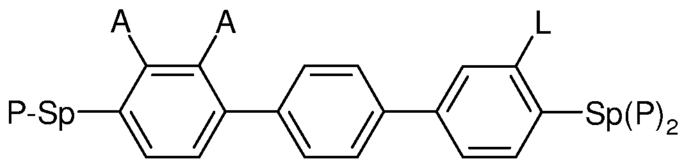

I2D-25-1

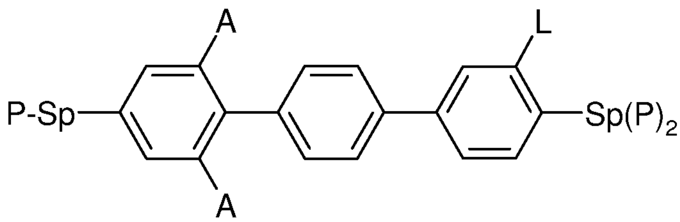

I2D-25-2

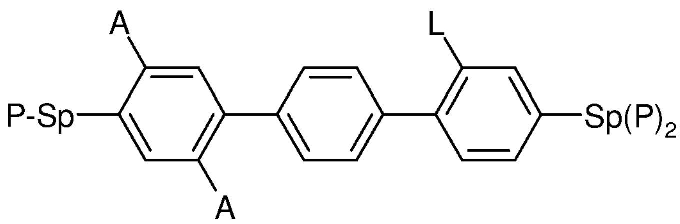

I2D-25-3

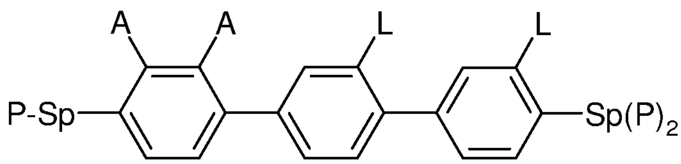

I2D-26-1

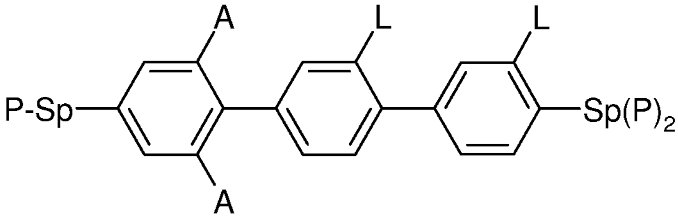

I2D-26-2

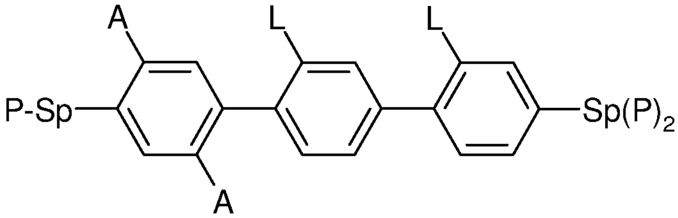

I2D-26-3

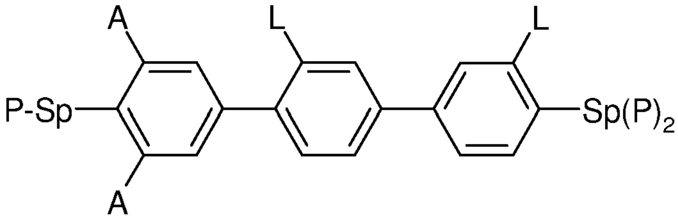

I2D-26-4

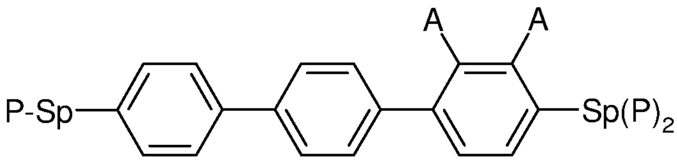

I2D-27-1

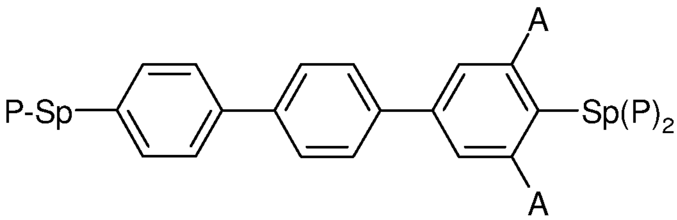

I2D-27-2

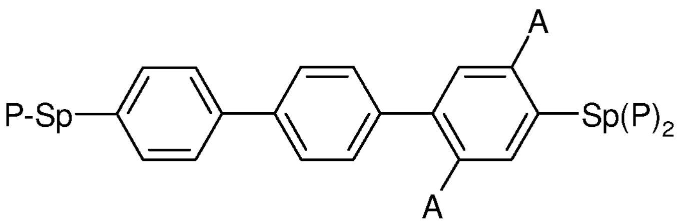

I2D-27-3

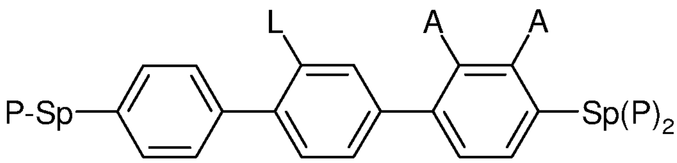

I2D-28-1

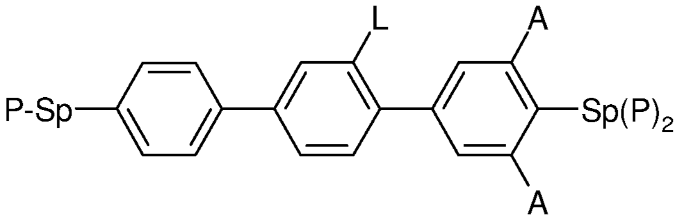
I2D-28-2

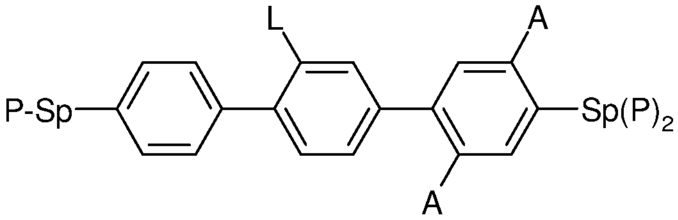
I2D-28-3

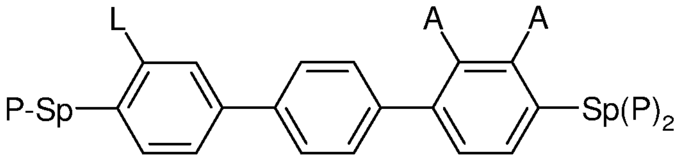
I2D-29-1

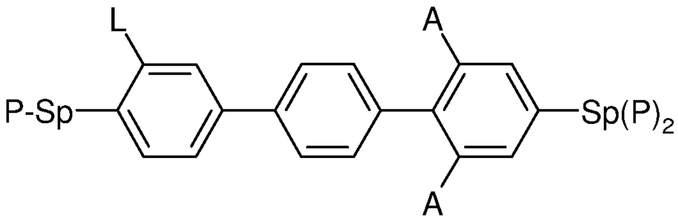
I2D-29-2

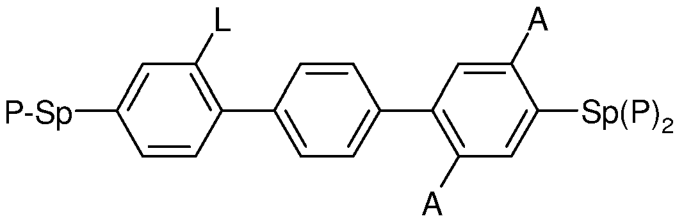
I2D-29-3

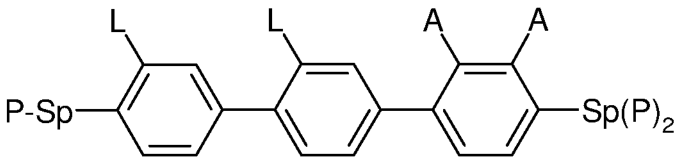
I2D-30-1

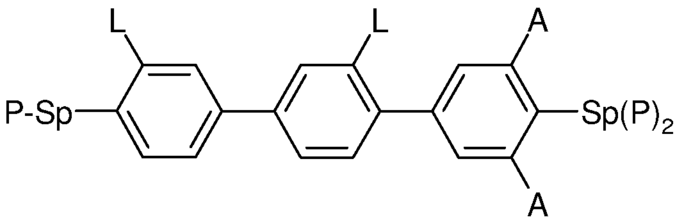
I2D-30-2

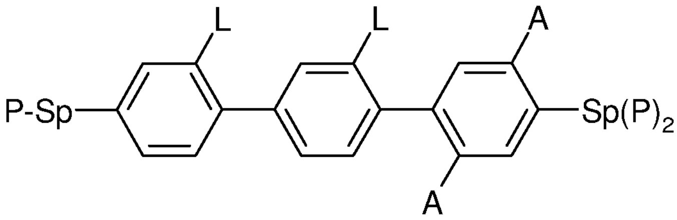

I2D-30-3

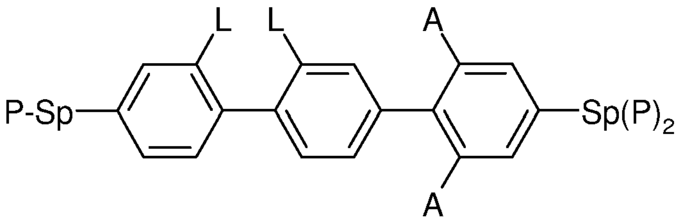

I2D-30-4

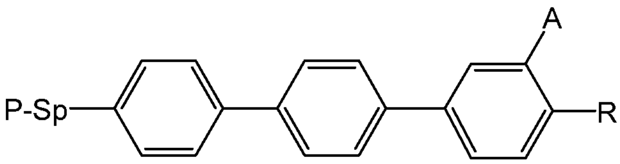

I2E-1-1

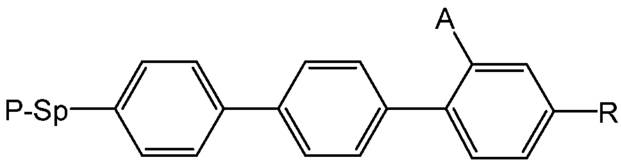

I2E-1-2

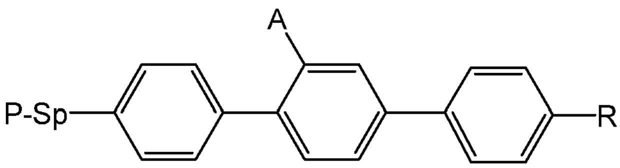

I2E-2-1

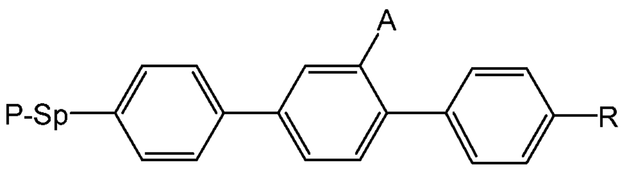

I2E-2-2

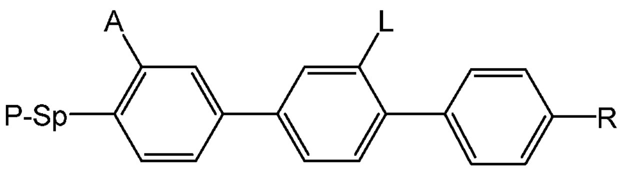

I2E-3-1

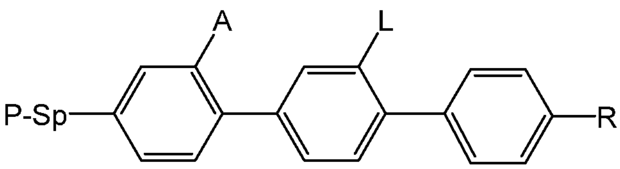

I2E-3-2

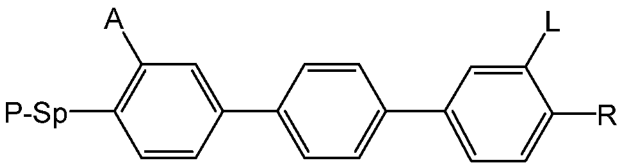

I2E-4-1

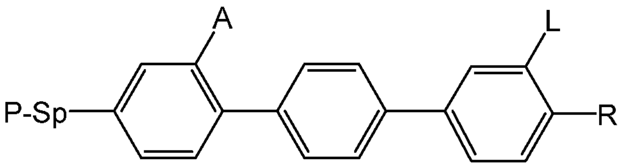

I2E-4-2

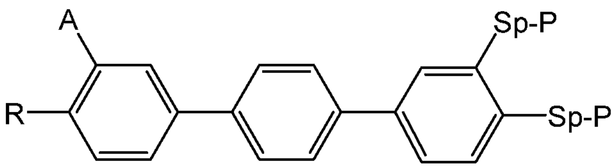

I2F-1-1

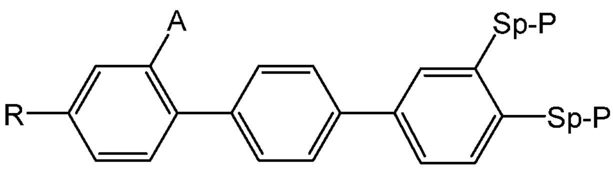

I2F-1-2

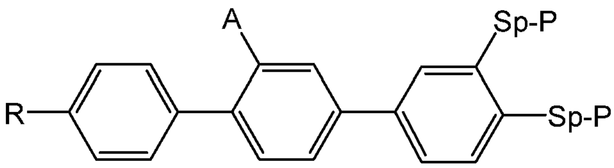

I2F-2-1

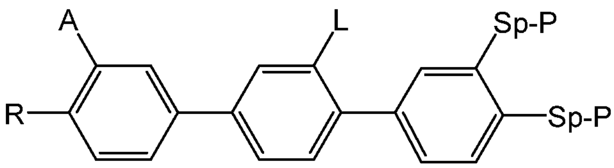

I2F-3-1

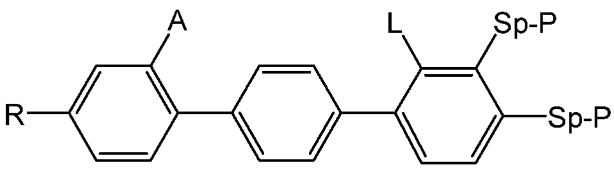

I2F-4-1

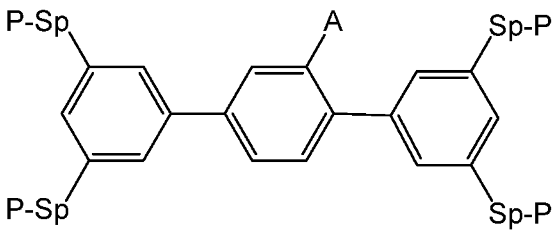

I2G-1-1

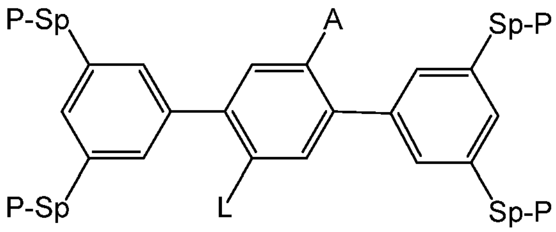

I2G-2-1

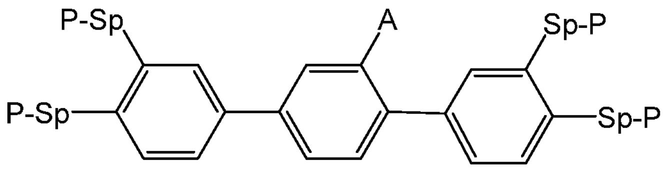

I2G-3-1

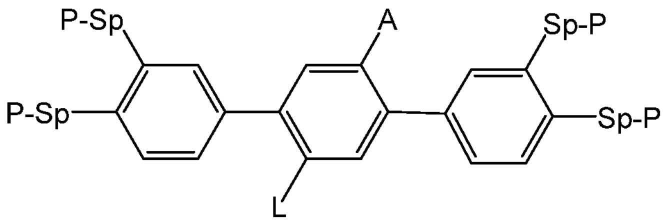

I2G-4-1

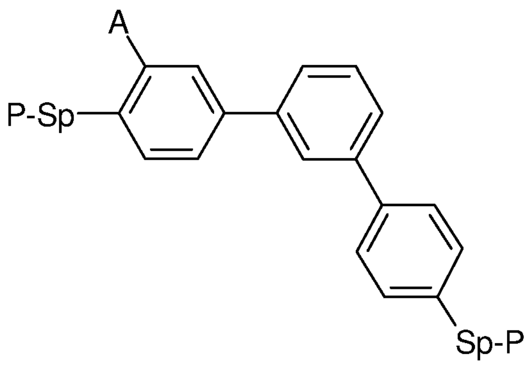

I5A-1-1

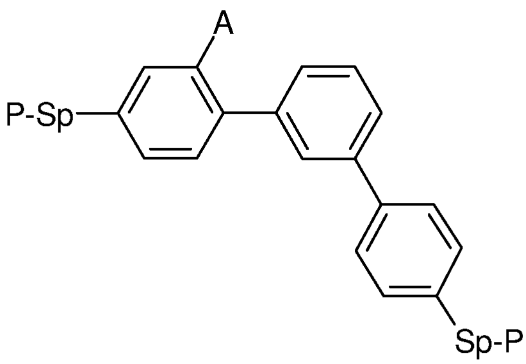

I5A-1-2

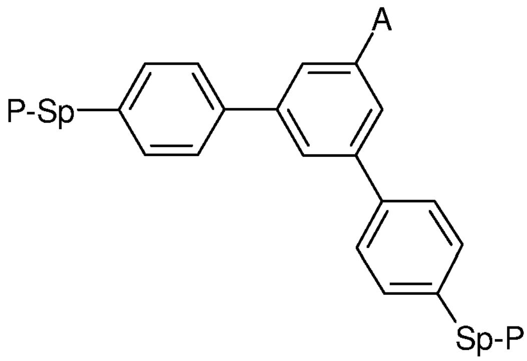

I5A-2-1

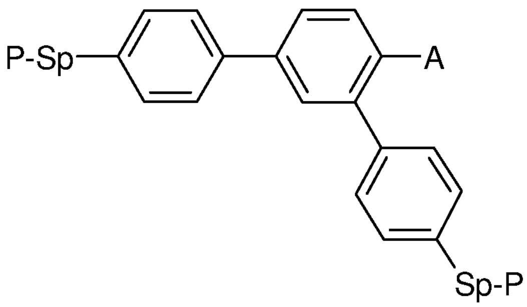

I5A-2-2

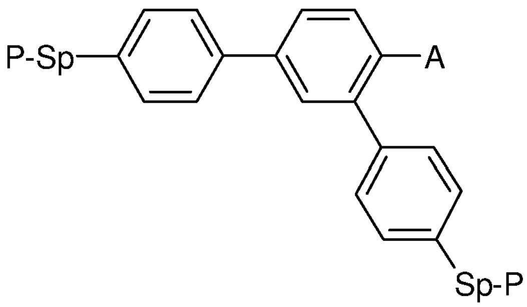

I5A-2-3

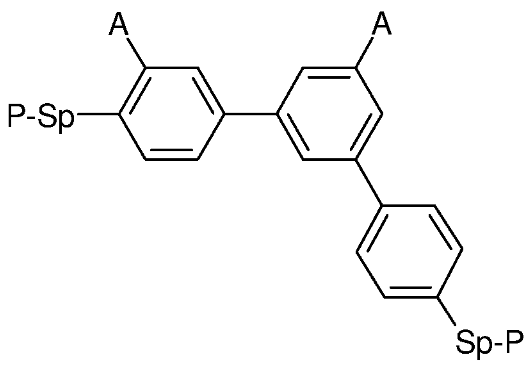

I5A-3-1

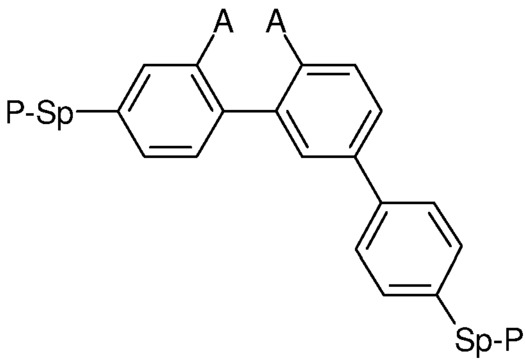

I5A-3-2

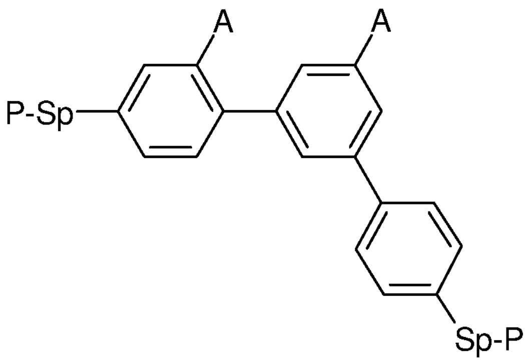

I5A-3-3

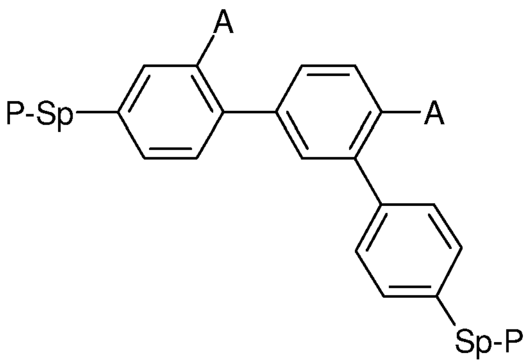

I5A-3-4

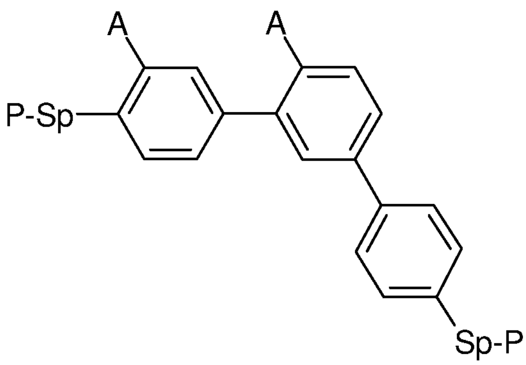

I5A-3-5

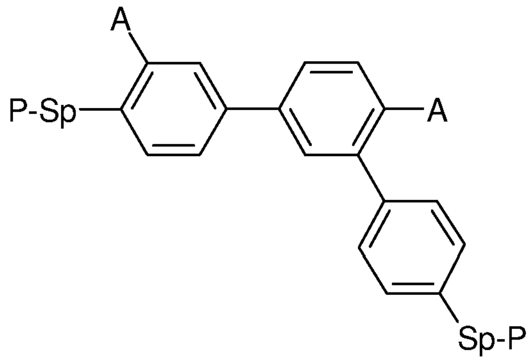

I5A-3-6

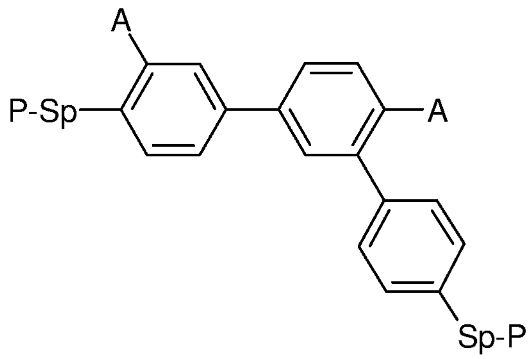

I5A-3-7

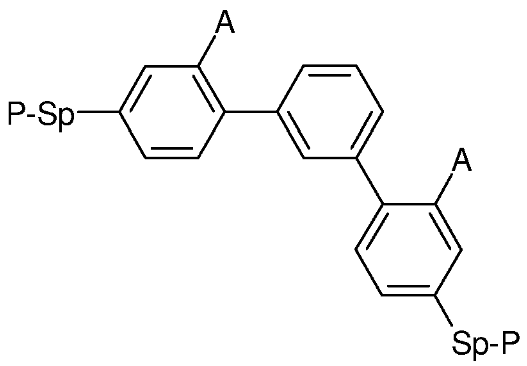

I5A-4-1

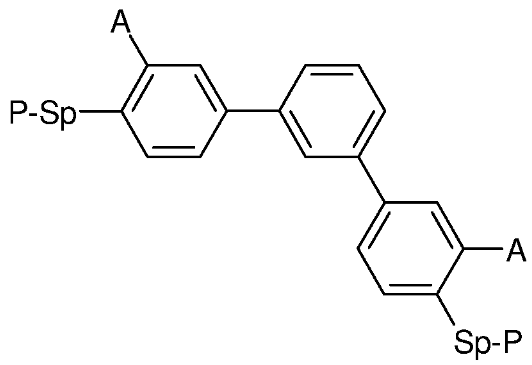

I5A-4-2

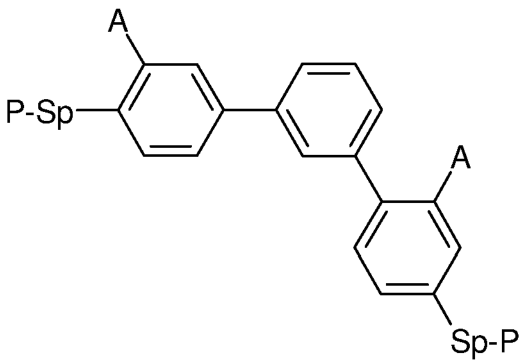

I5A-4-3

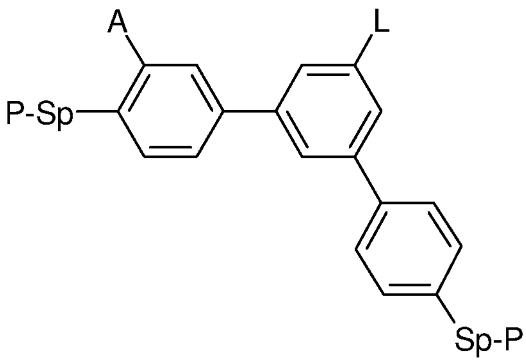

I5A-5-1

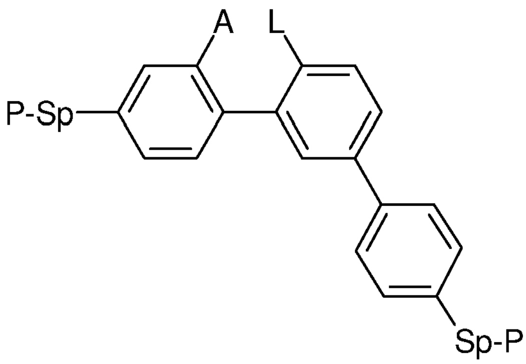

I5A-5-2

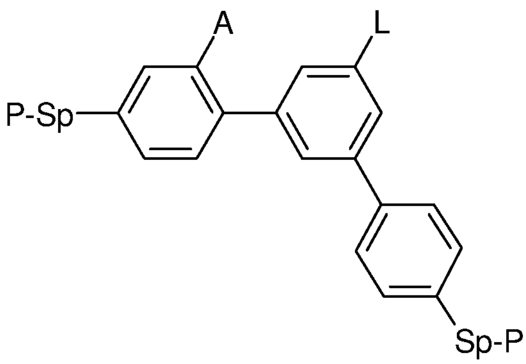

I5A-5-3

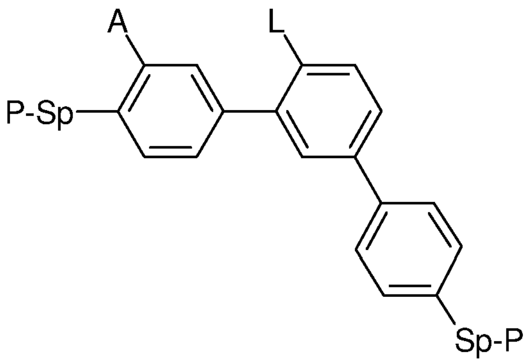

I5A-5-4

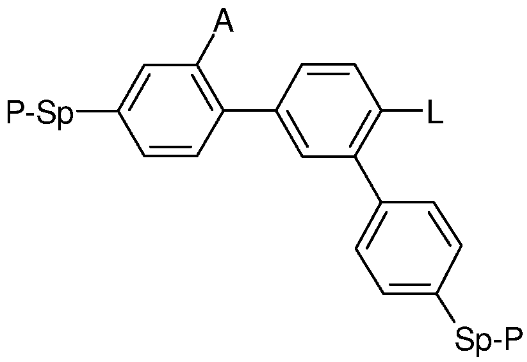

I5A-5-5

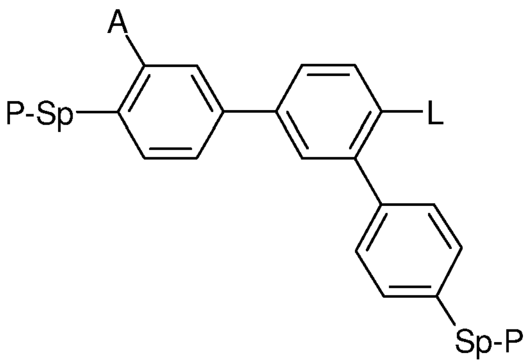

I5A-5-6

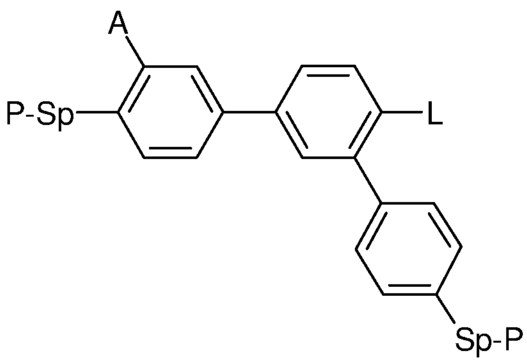

I5A-5-7

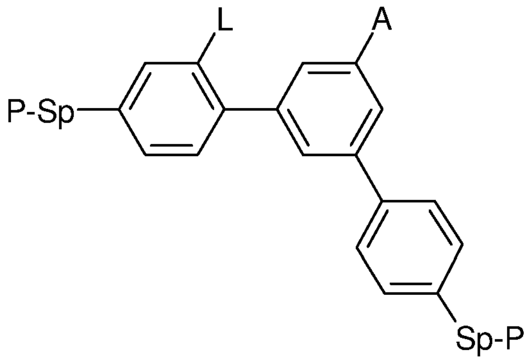

I5A-6-1

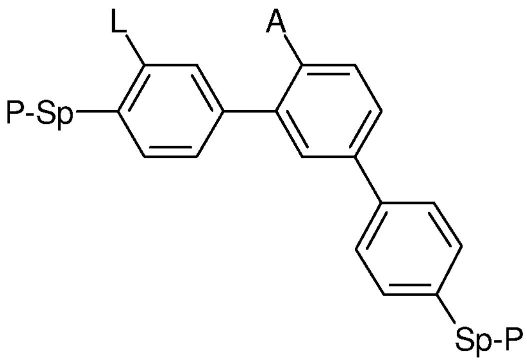

I5A-6-2

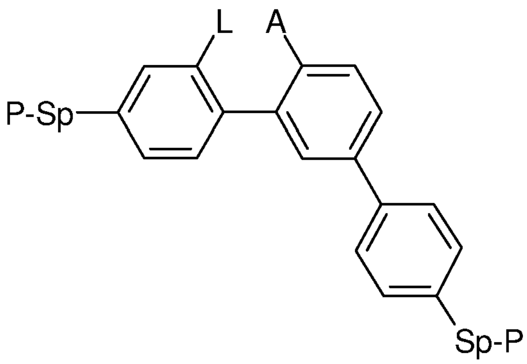

I5A-6-3

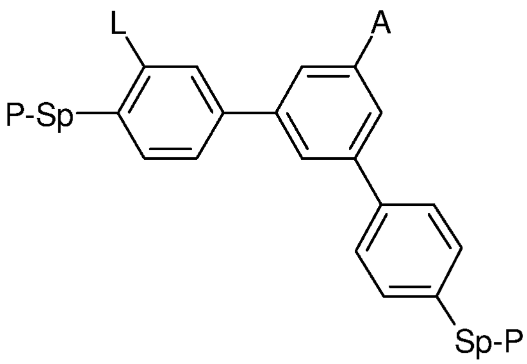

I5A-6-4

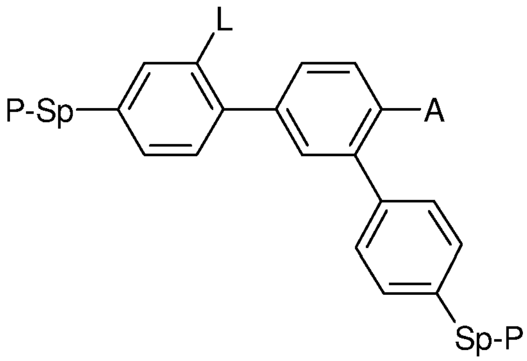

I5A-6-5

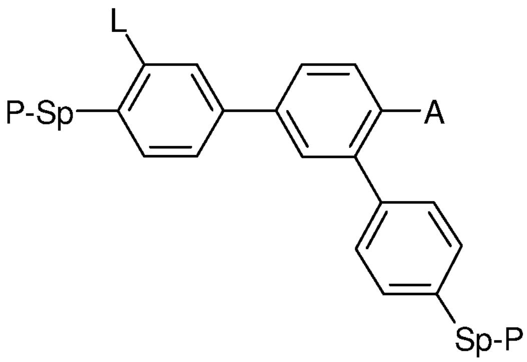

I5A-6-6

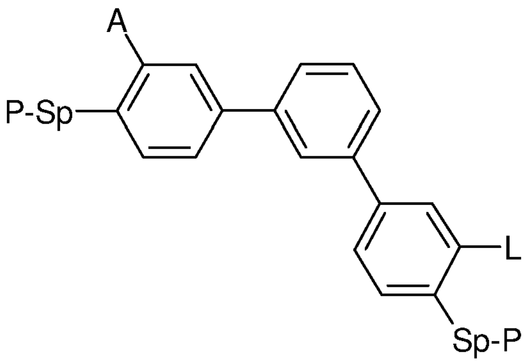

I5A-7-1

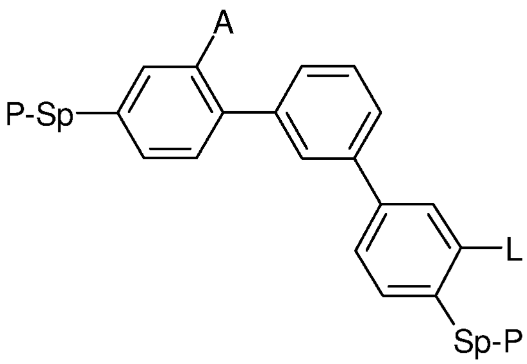

I5A-7-2

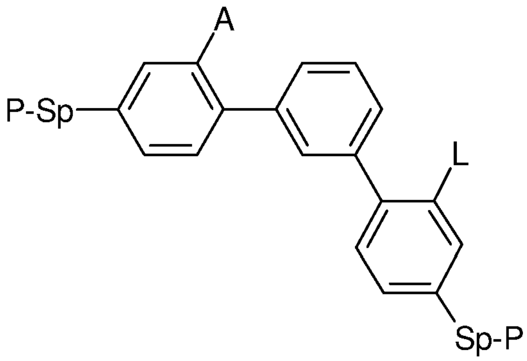

I5A-7-3

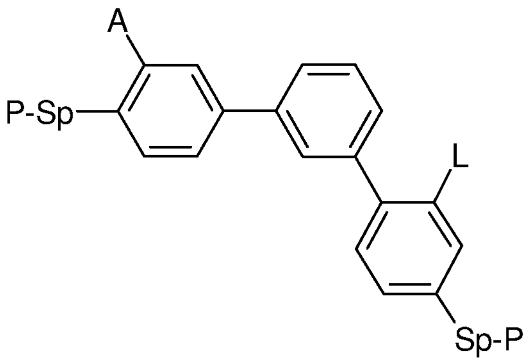

I5A-7-4

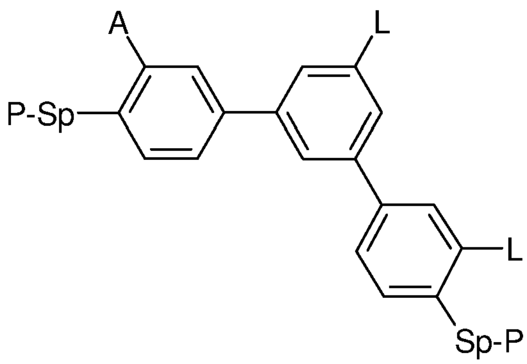

I5A-8-1

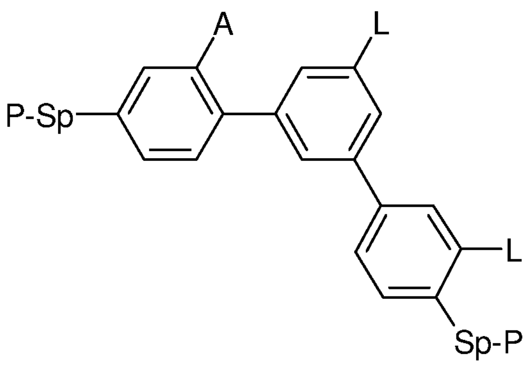

I5A-8-2

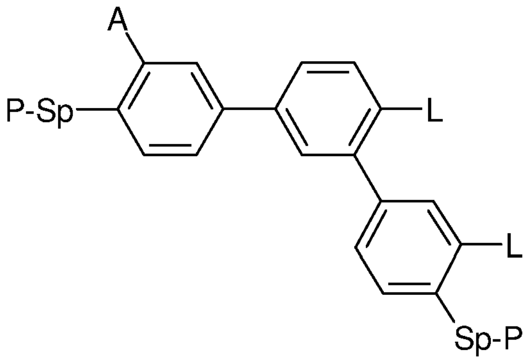

I5A-8-3

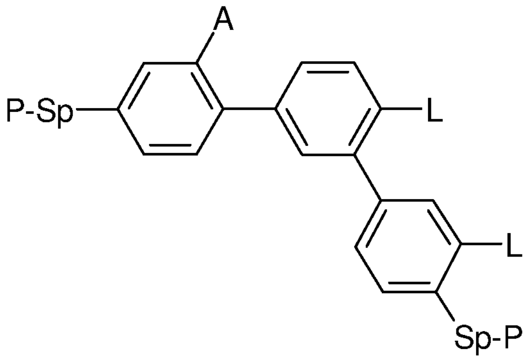

I5A-8-4

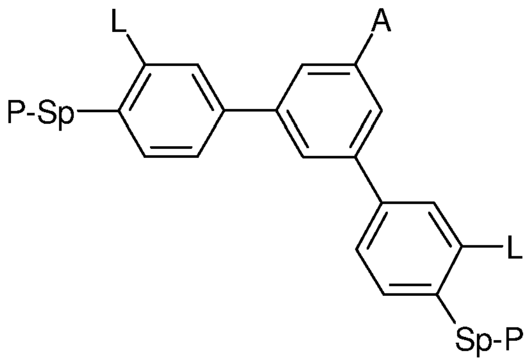

I5A-9-1

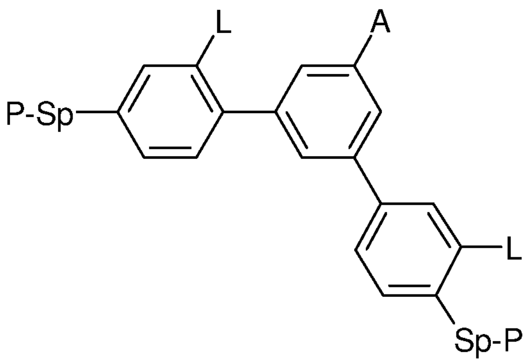

I5A-9-2

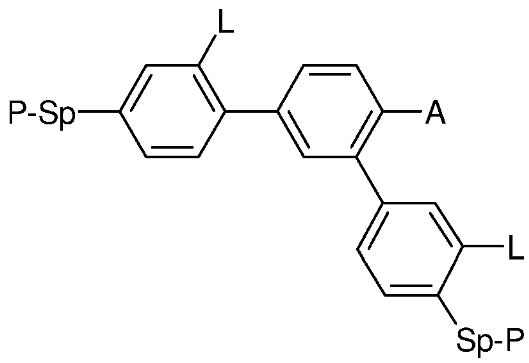

I5A-9-3

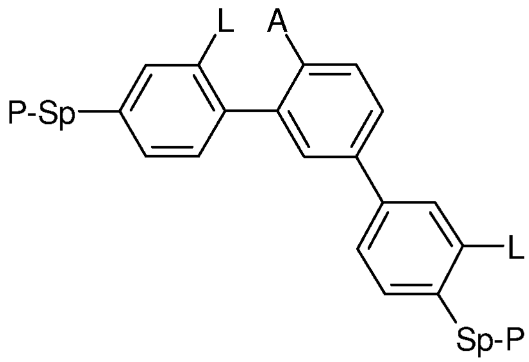

I5A-9-4

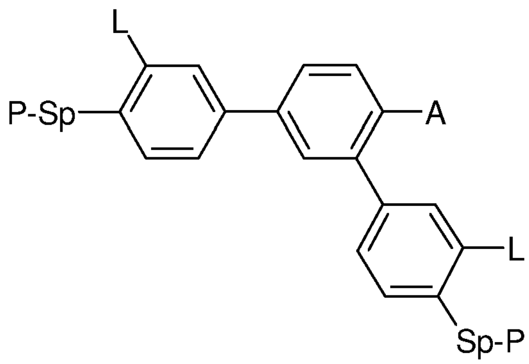

I5A-9-5

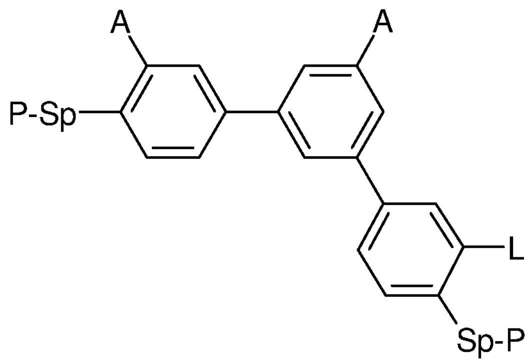

I5A-10-1

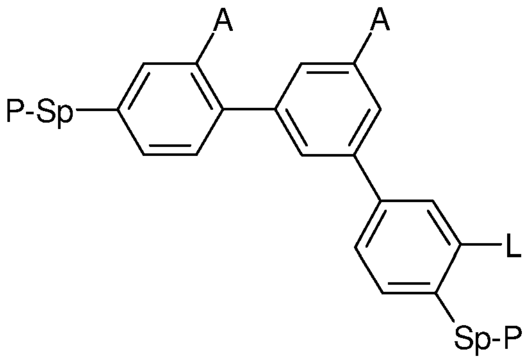

I5A-10-2

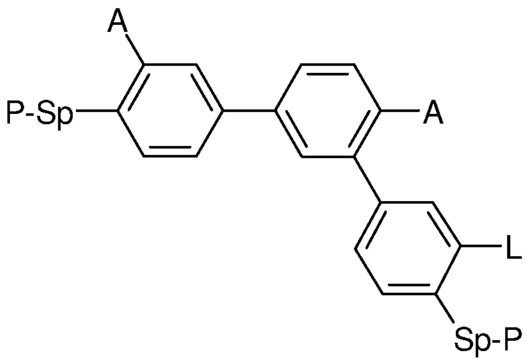

I5A-10-3

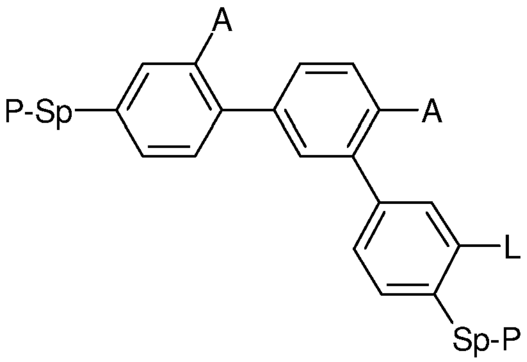

I5A-10-4

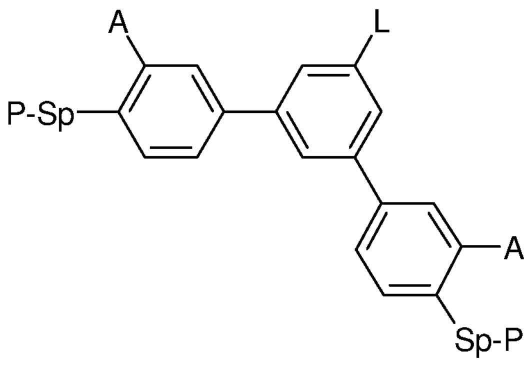

I5A-11-1

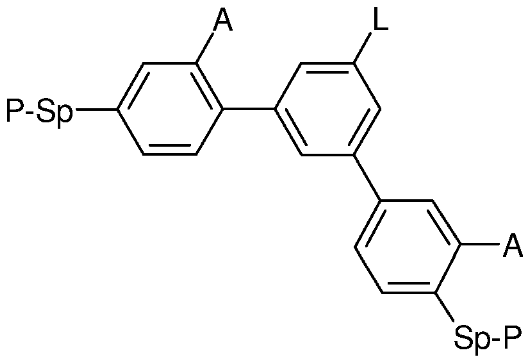

I5A-11-2

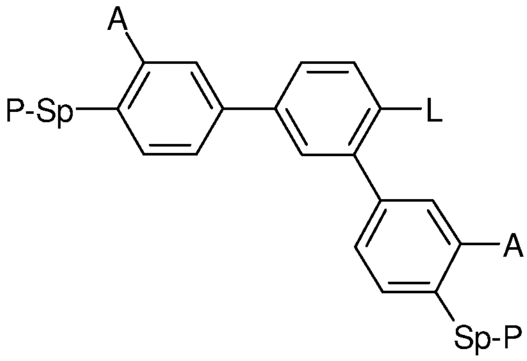

I5A-11-3

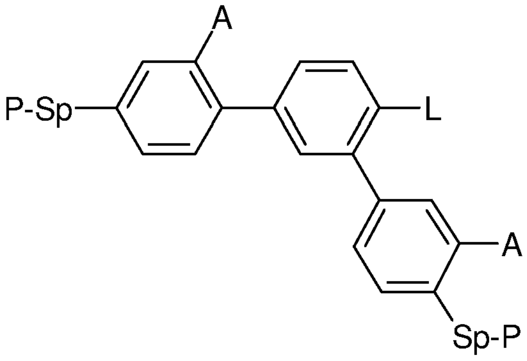

I5A-11-4

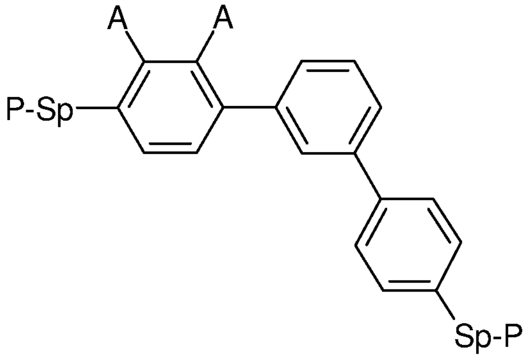

I5A-12-1

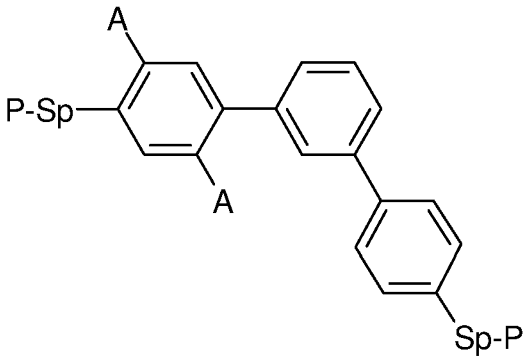

I5A-12-2

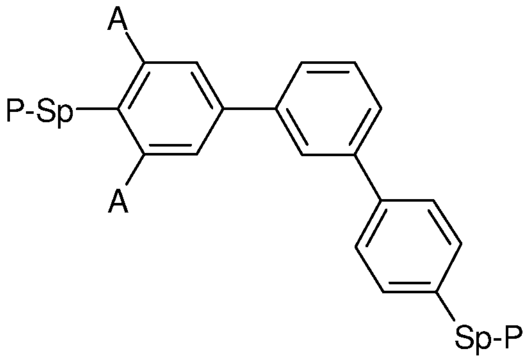

I5A-12-3

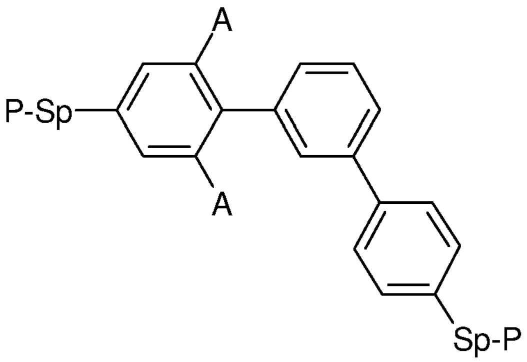

I5A-12-4

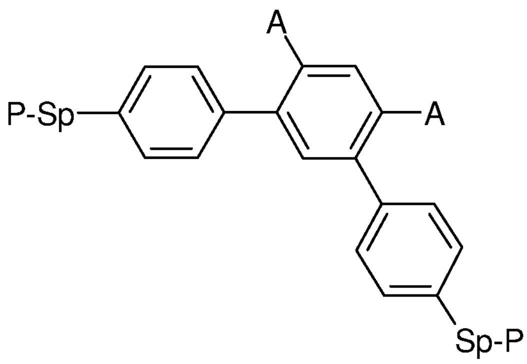

I5A-13-1

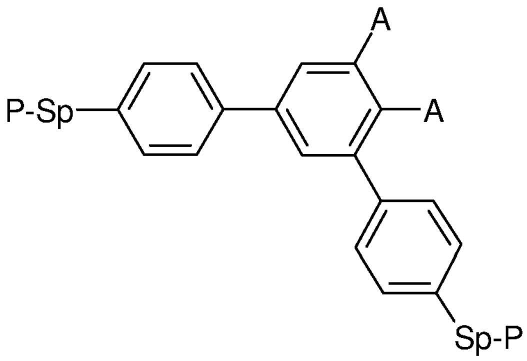

I5A-13-2

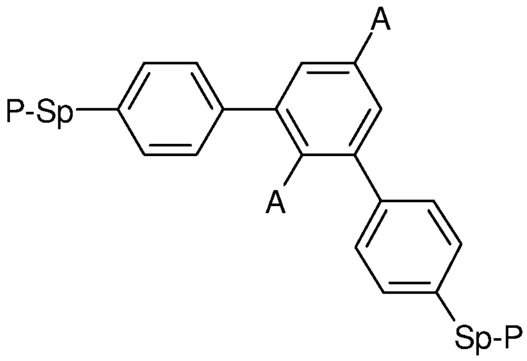

I5A-13-3

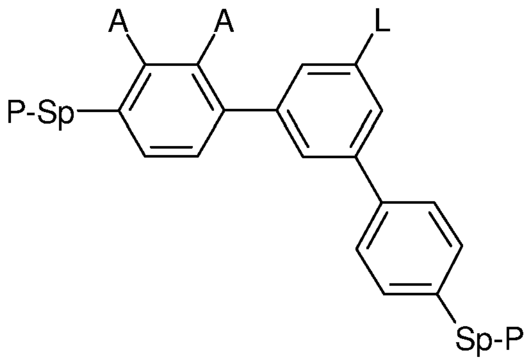

I5A-14-1

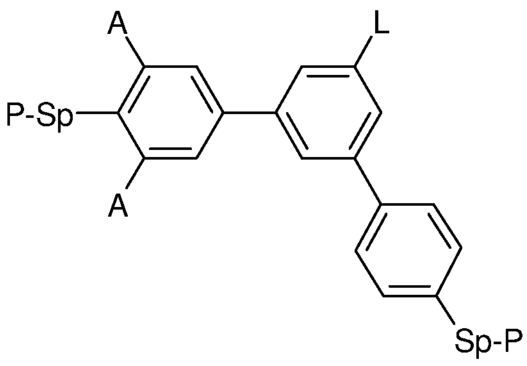

I5A-14-2

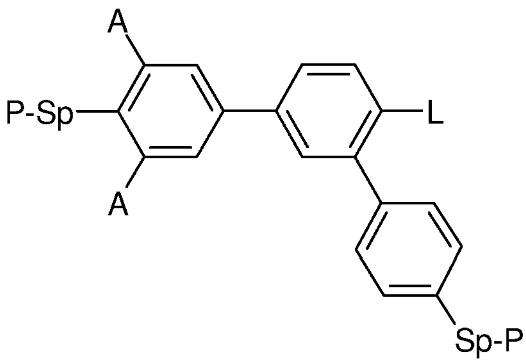

I5A-14-3

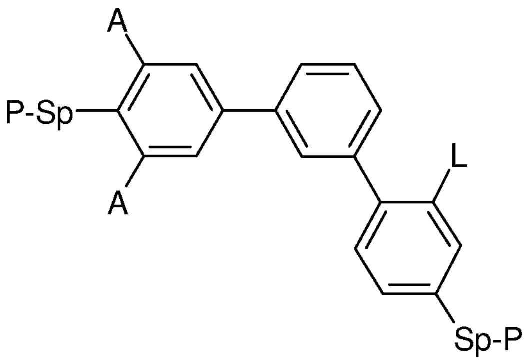

I5A-15-1

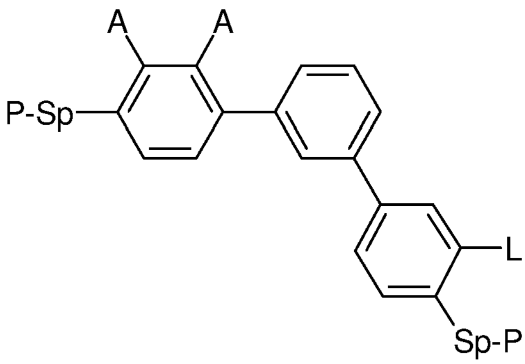

I5A-15-2

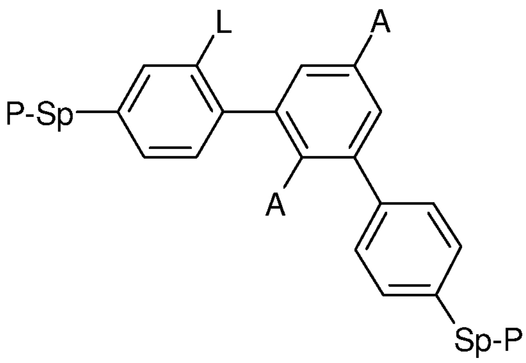

I5A-16-1

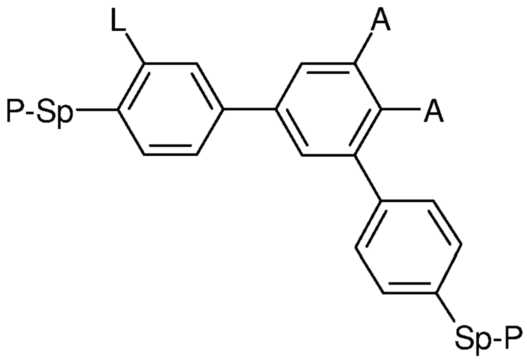

I5A-16-2

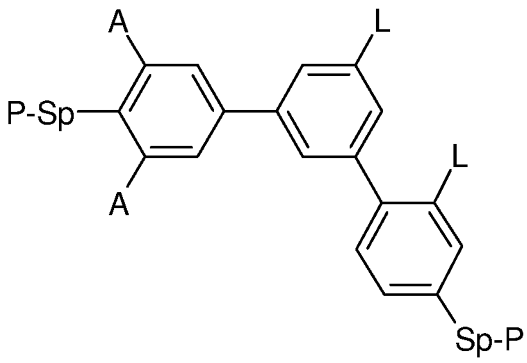

I5A-18-1

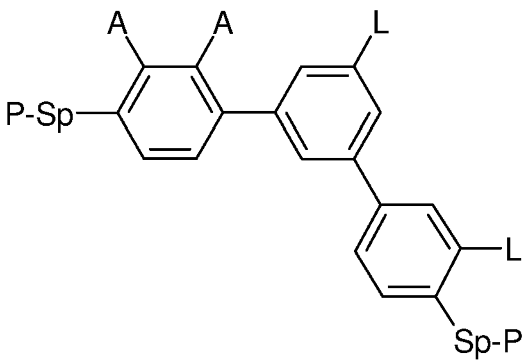

I5A-18-2

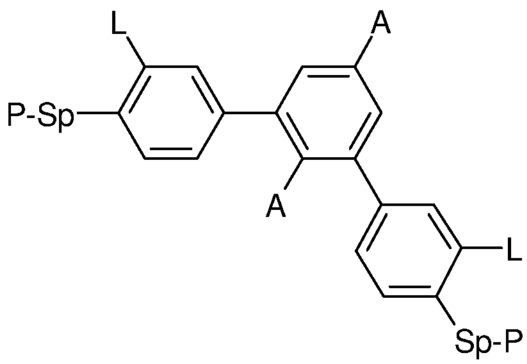

I5A-19-1

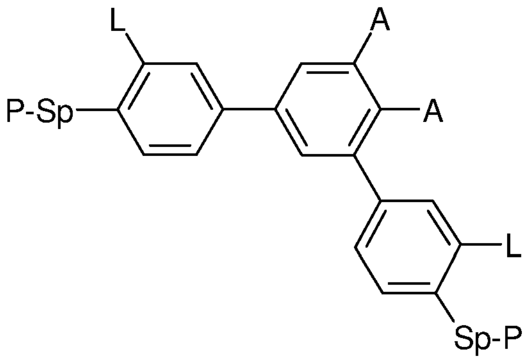

I5A-19-2

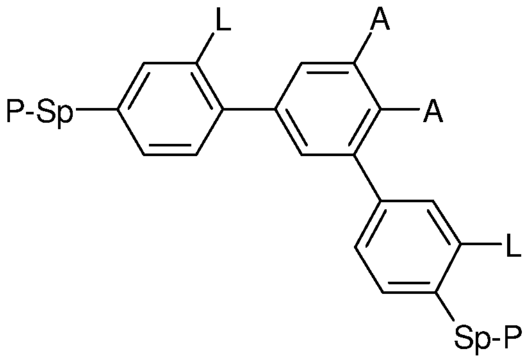

I5A-19-3

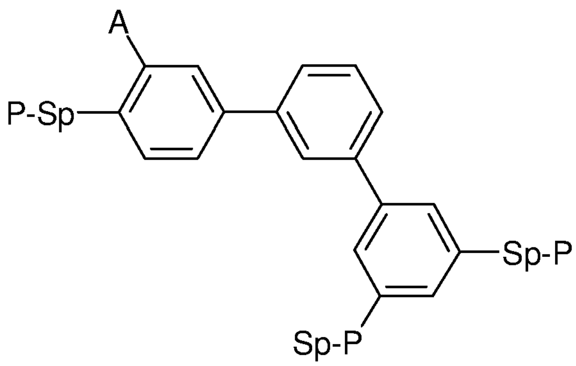

I5B-1-1

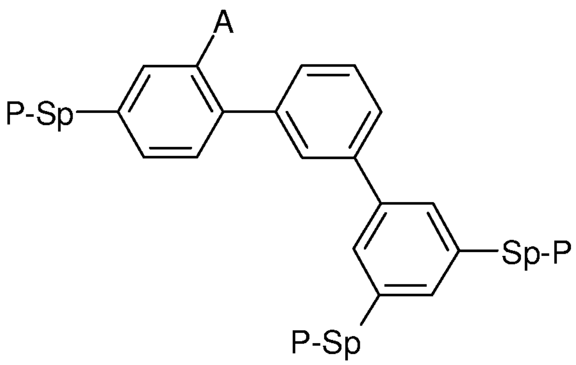

I5B-1-2

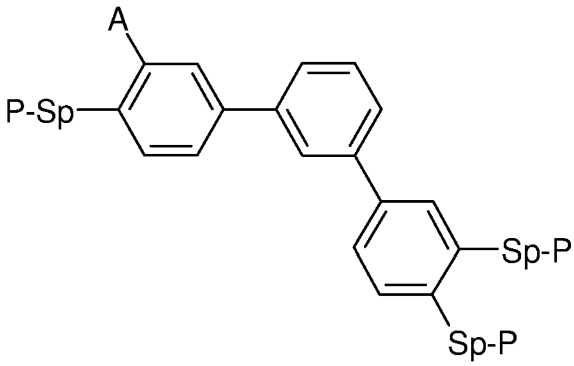

I5B-1-3

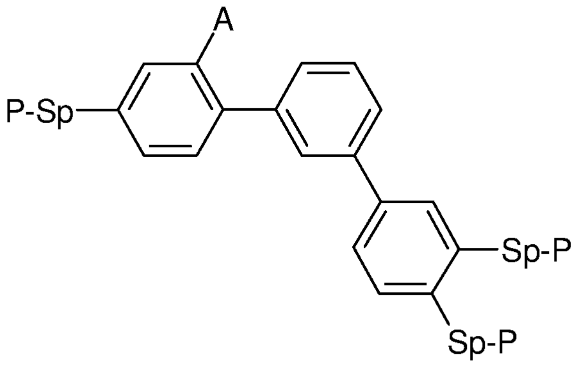

I5B-1-4

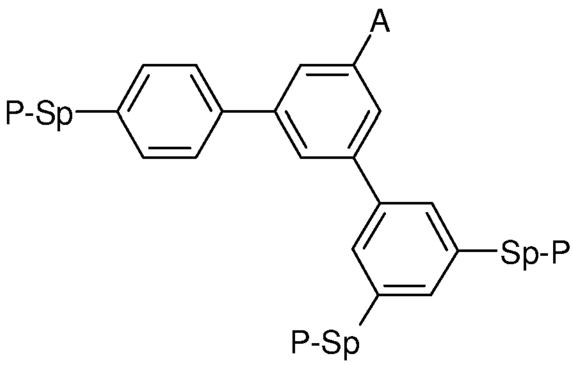

I5B-2-1

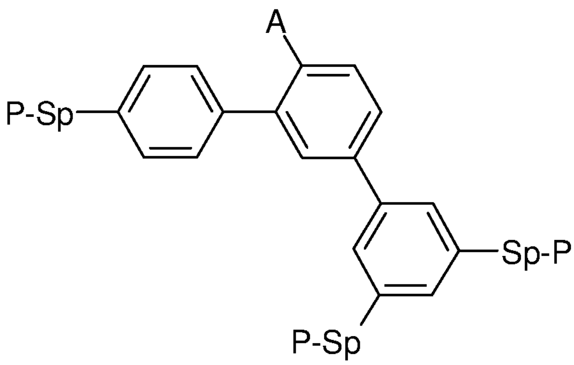

I5B-2-2

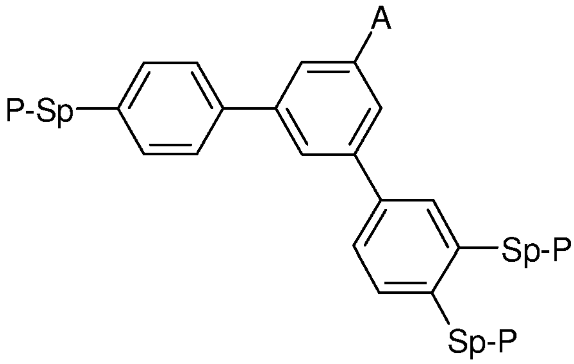

I5B-2-3

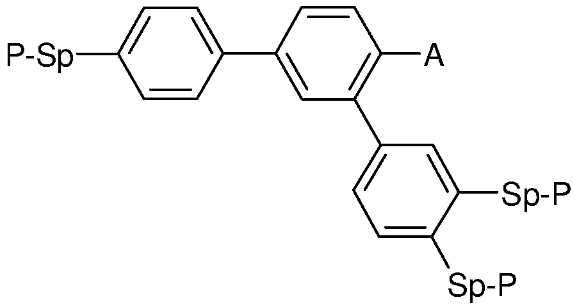

I5B-2-4

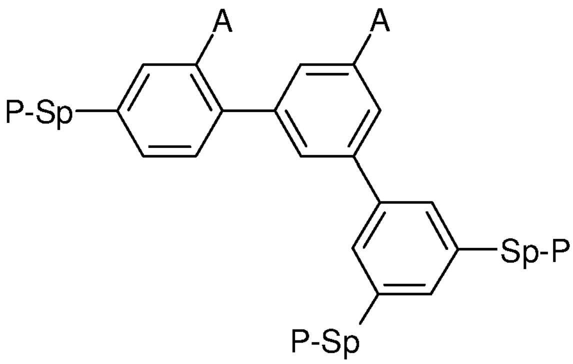

I5B-3-1

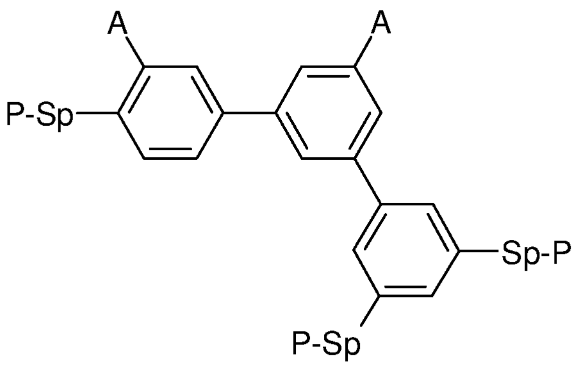

I5B-3-2

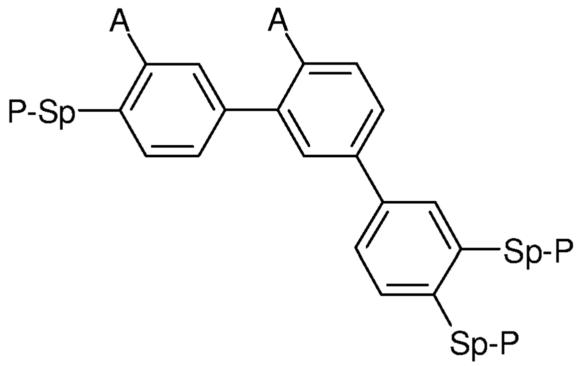

I5B-3-3

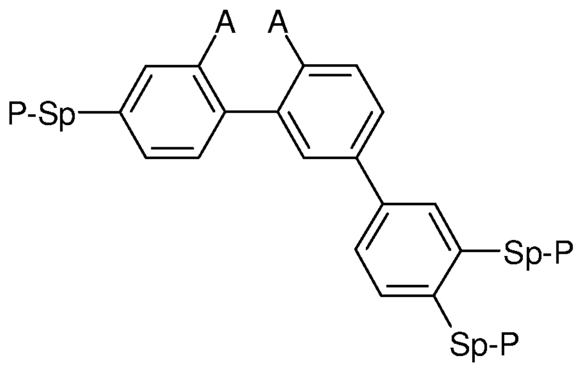

I5B-3-4

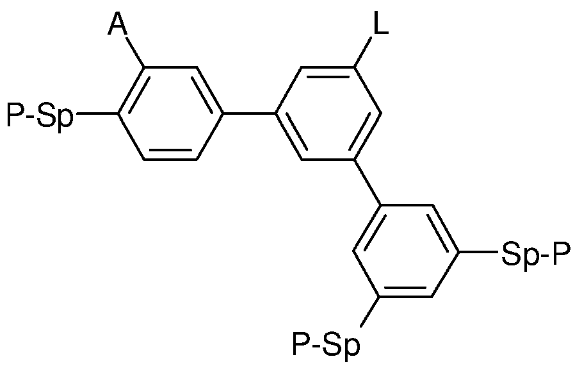

I5B-4-1

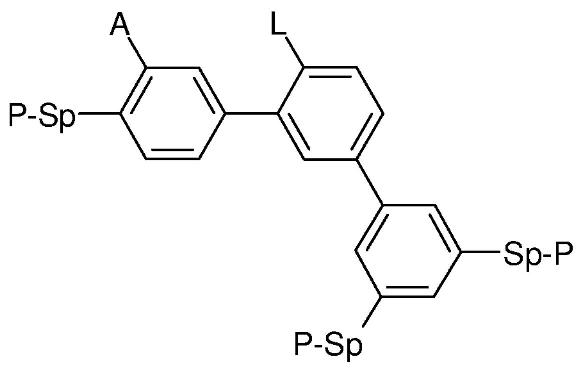

I5B-4-2

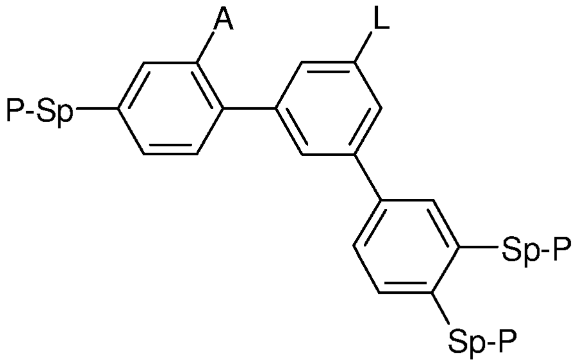

I5B-4-3

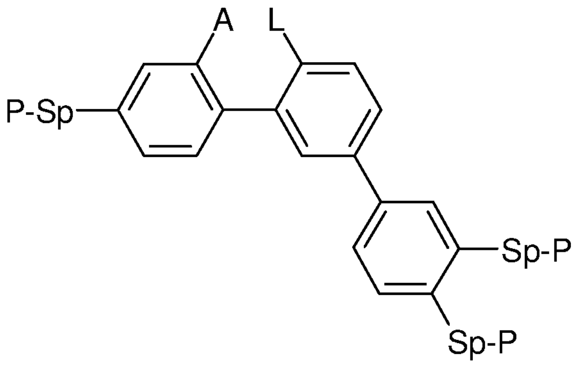

I5B-4-4

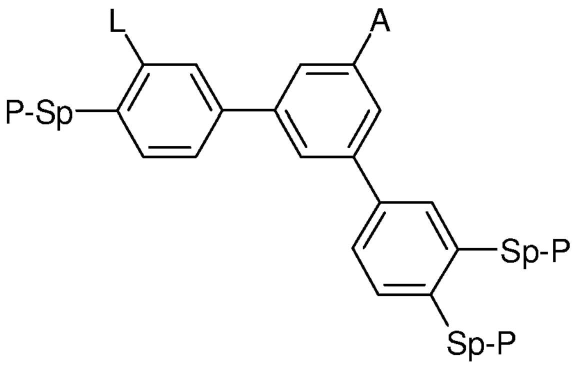

I5B-5-1

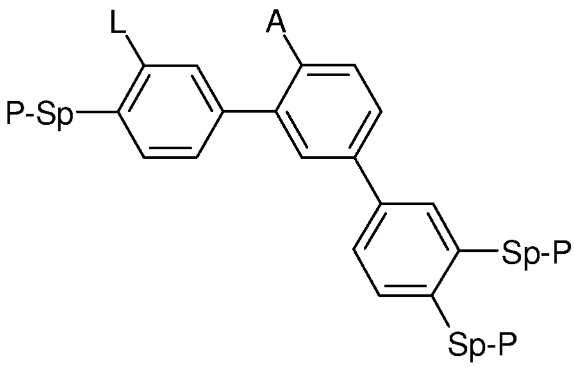

I5B-5-2

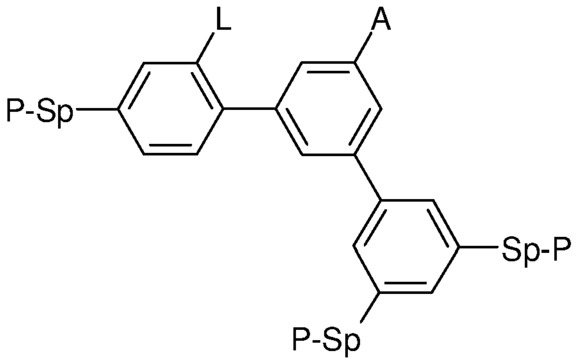

I5B-5-3

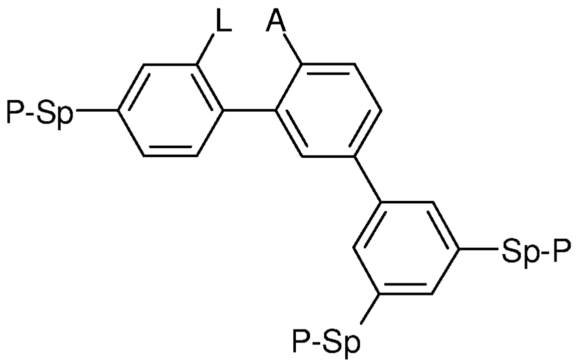

I5B-5-4

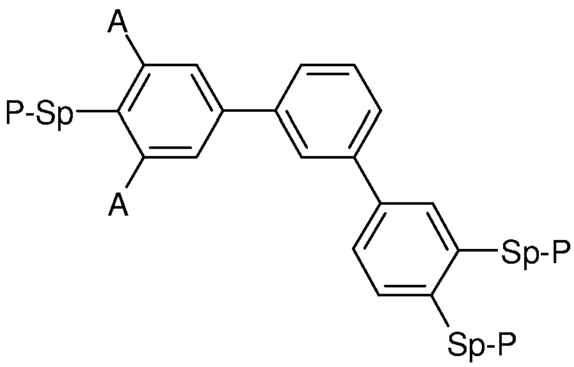

I5B-6-1

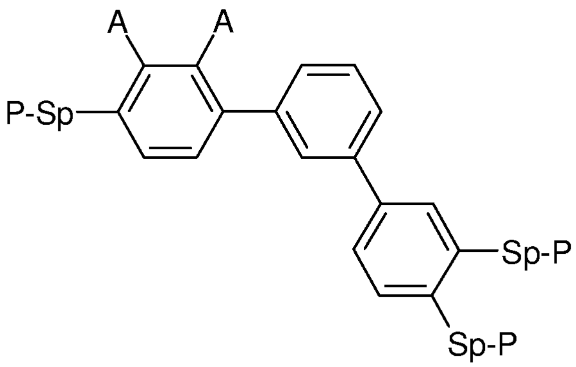

I5B-6-2

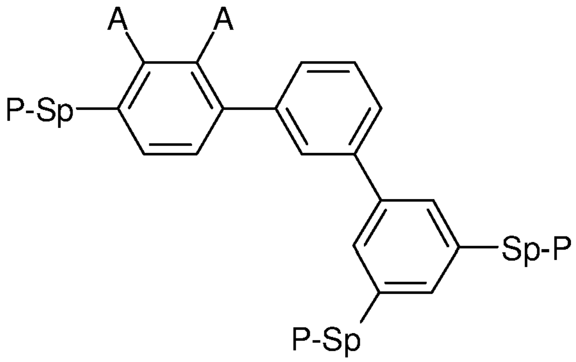

I5B-6-3

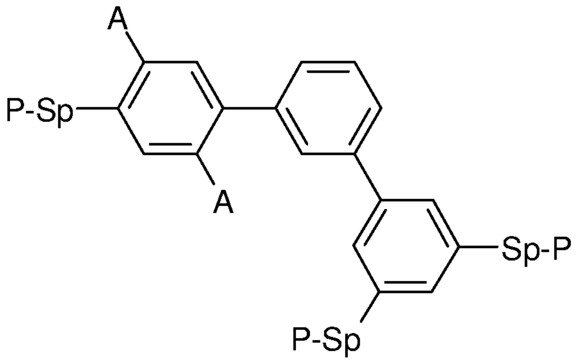

I5B-6-4

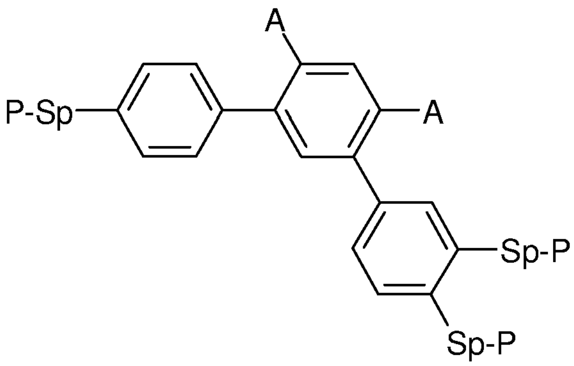

I5B-7-1

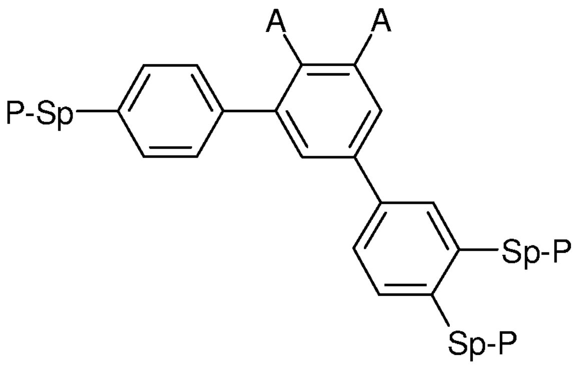

I5B-7-2

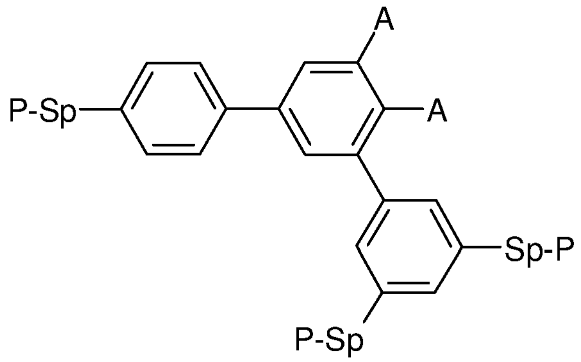

I5B-7-3

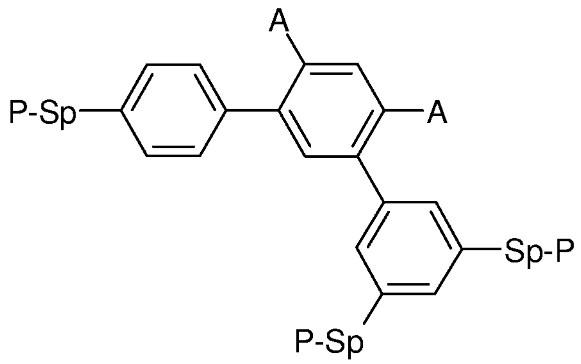

I5B-7-4

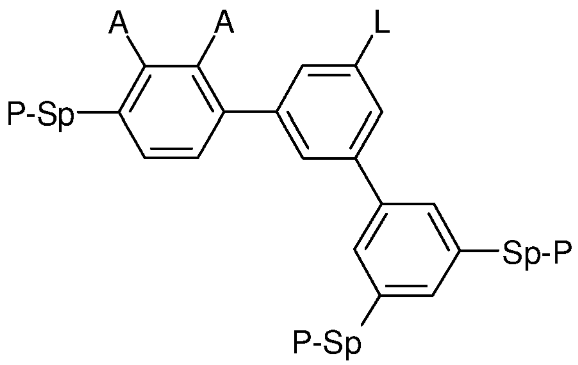

I5B-8-1

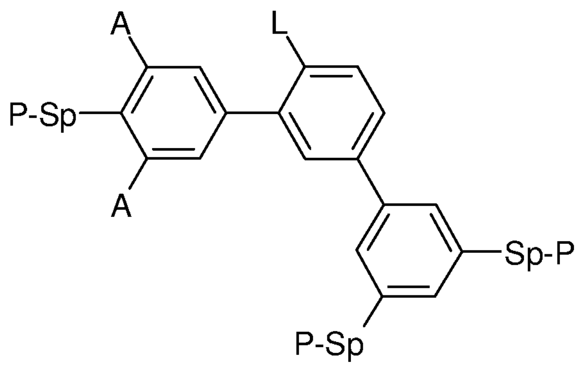

I5B-8-2

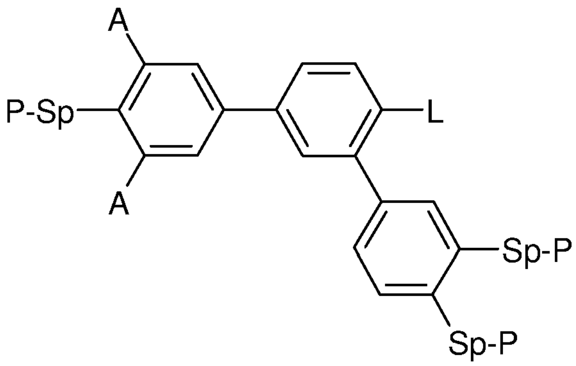

I5B-8-3

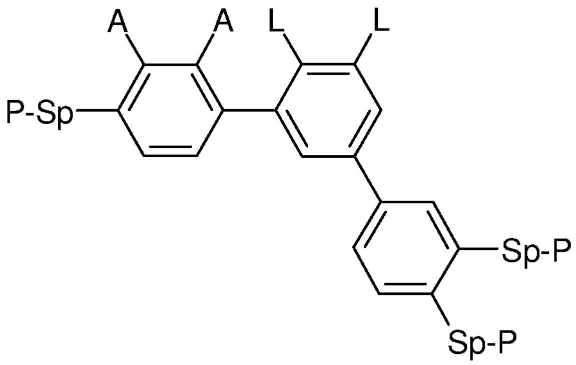

I5B-8-4

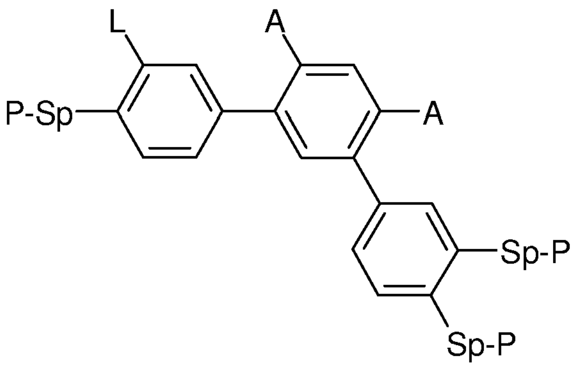

I5B-9-1

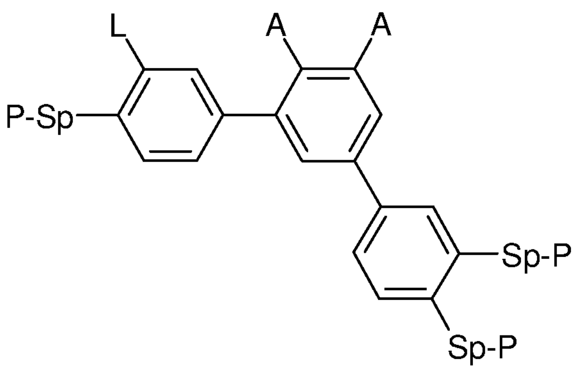

I5B-9-2

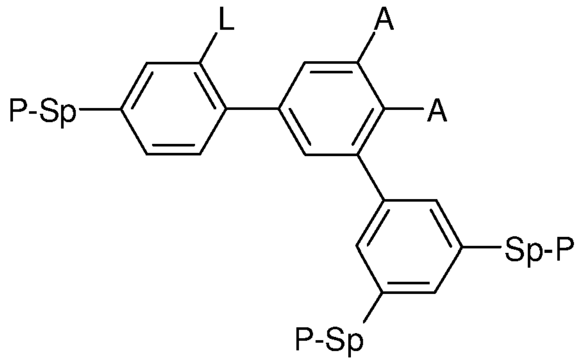

I5B-9-3

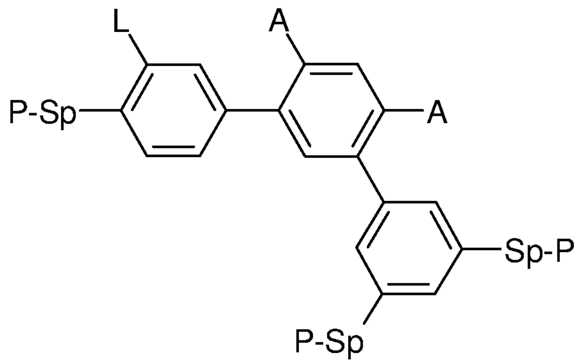

I5B-9-4

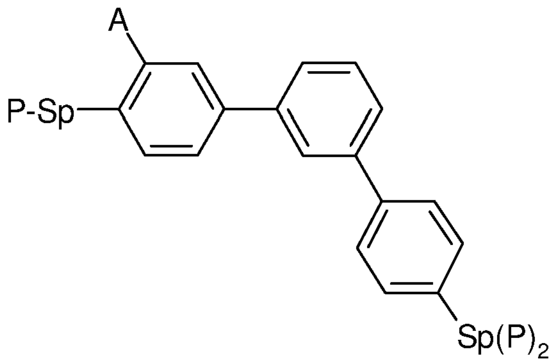

I5C-1-1

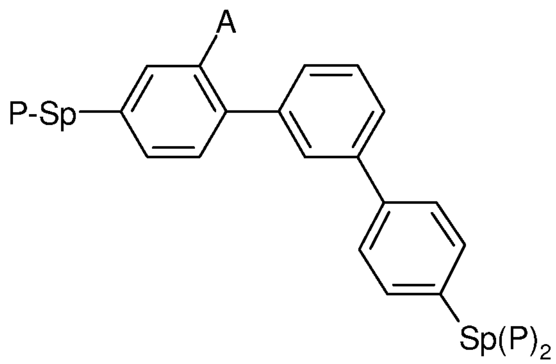

I5C-1-2

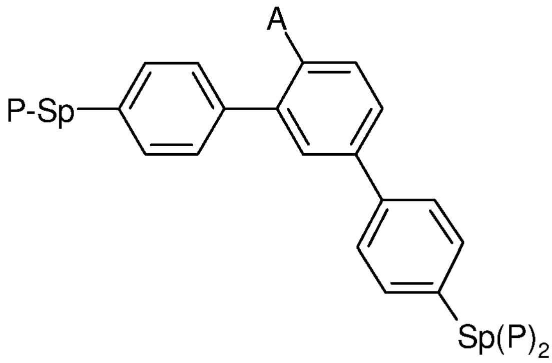

I5C-2-1

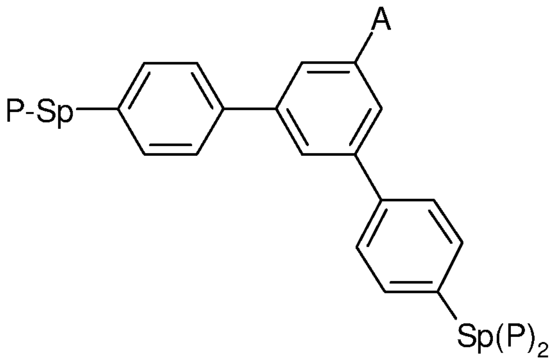

I5C-2-2

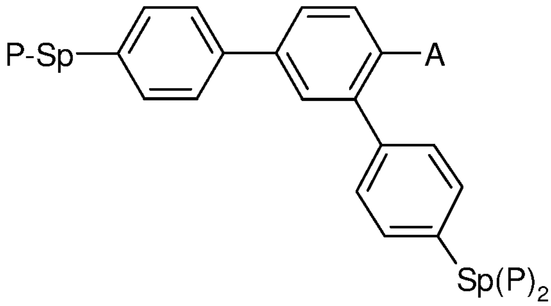

I5C-2-3

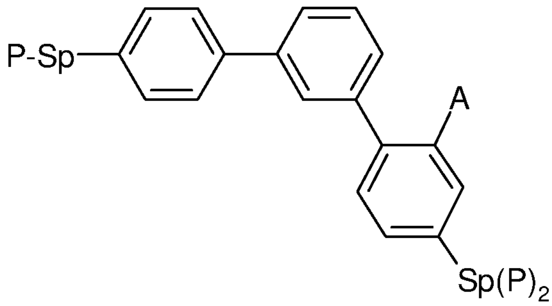

I5C-3-1

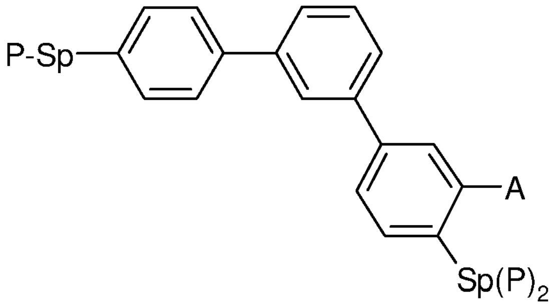

I5C-3-2

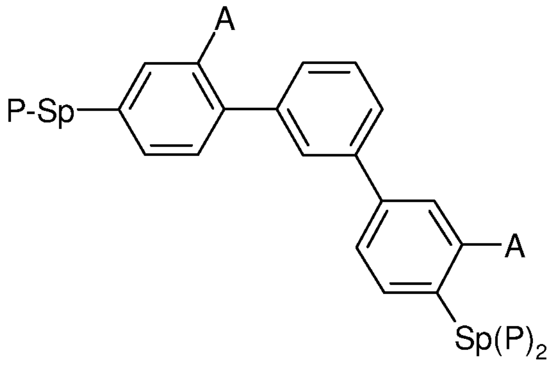

I5C-4-1

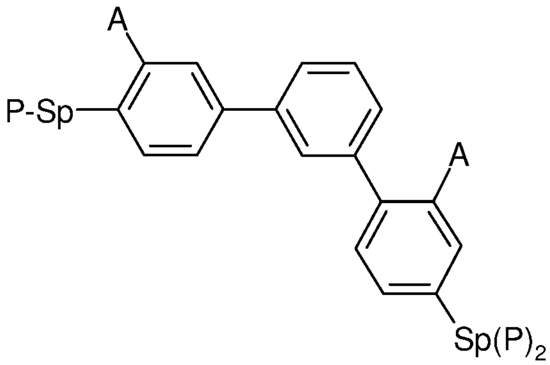

I5C-4-2

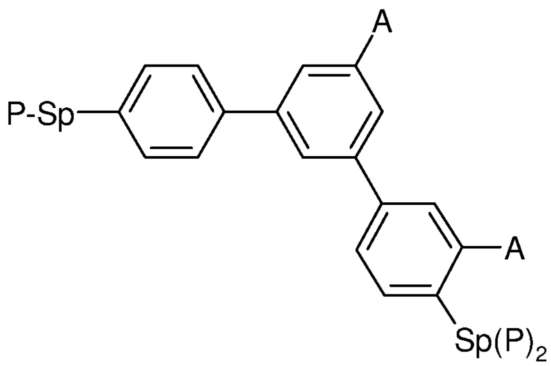

I5C-5-1

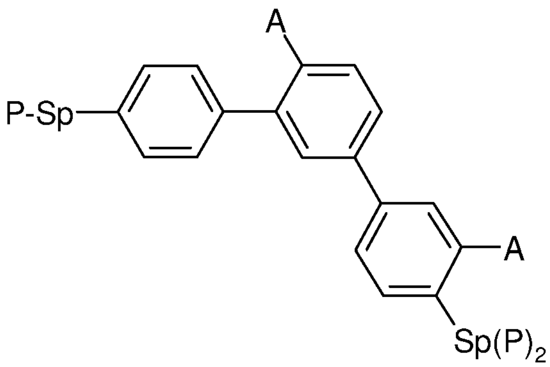

I5C-5-2

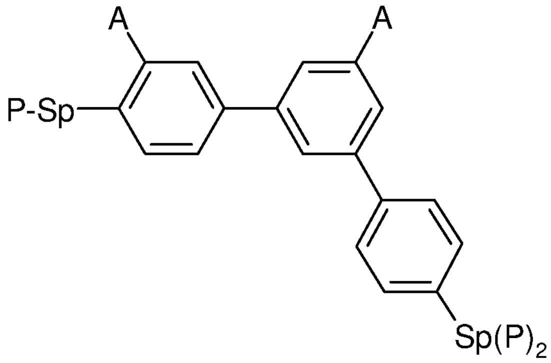

I5C-6-1

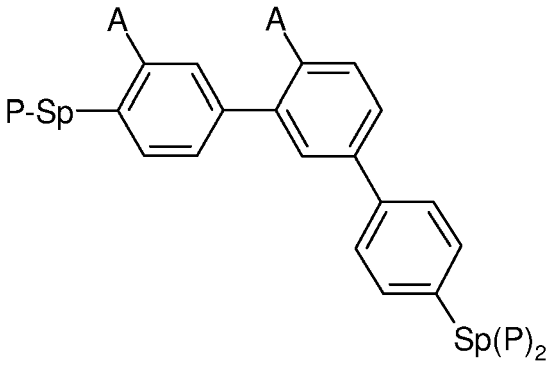

I5C-6-2

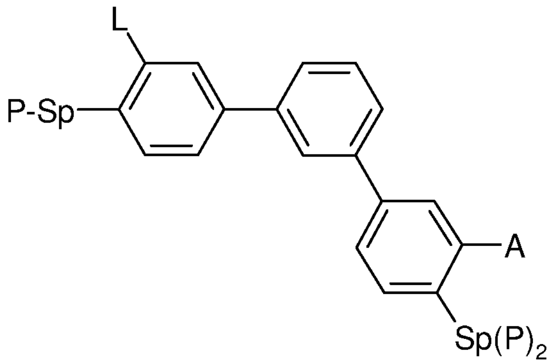

I5C-7-1

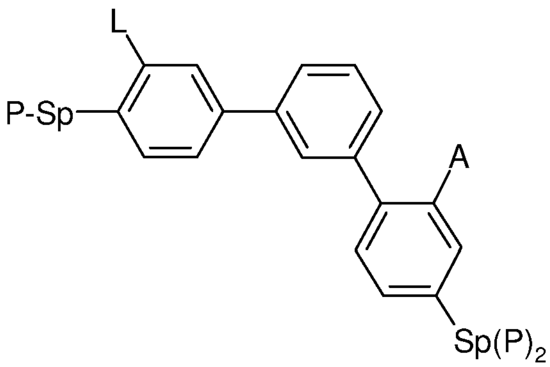

I5C-7-2

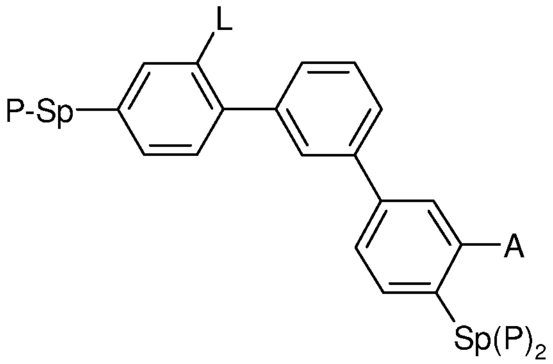

I5C-7-3

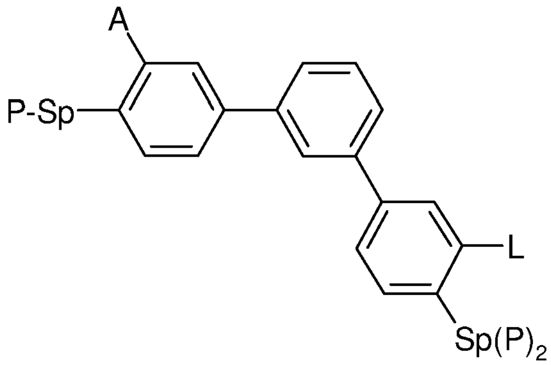

I5C-8-1

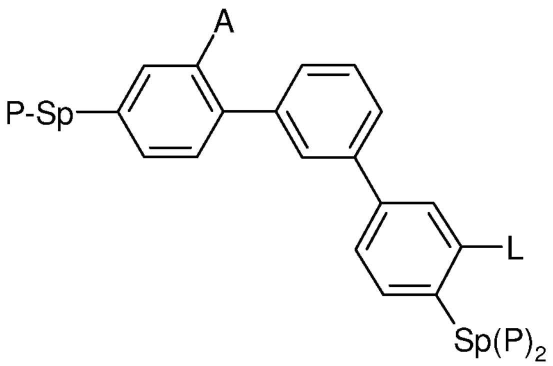

I5C-8-2

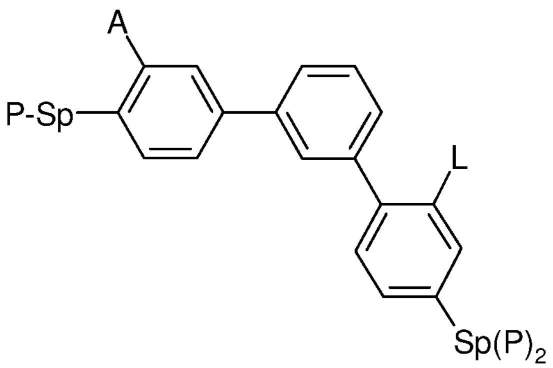

I5C-8-3

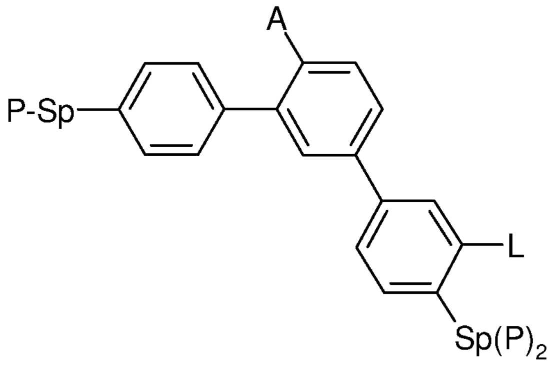

I5C-9-1

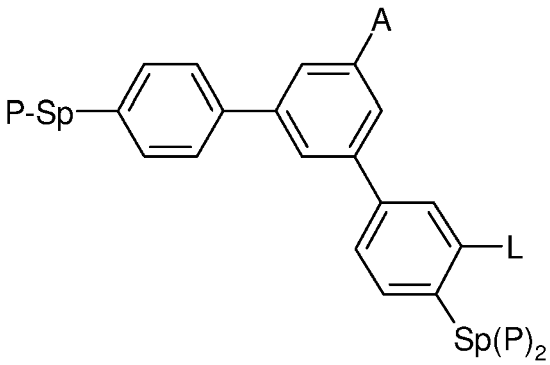

I5C-9-2

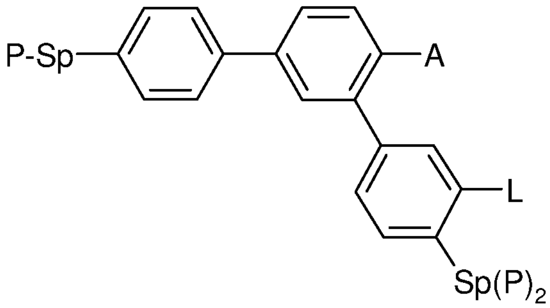

I5C-9-3

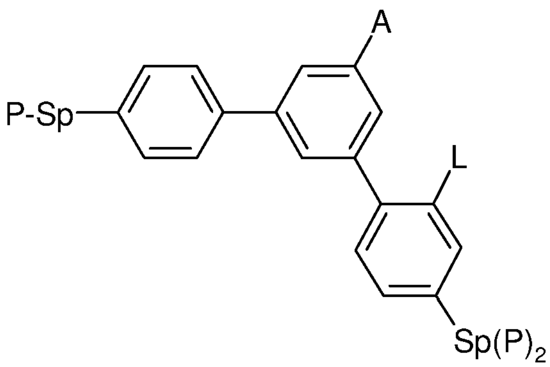

I5C-9-4

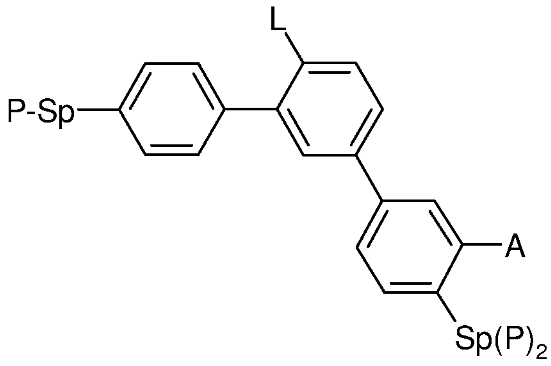

I5C-10-1

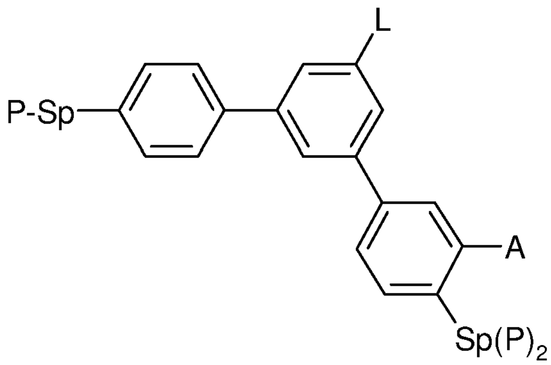

I5C-10-2

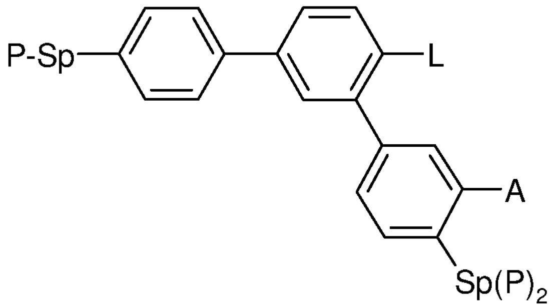

I5C-10-3

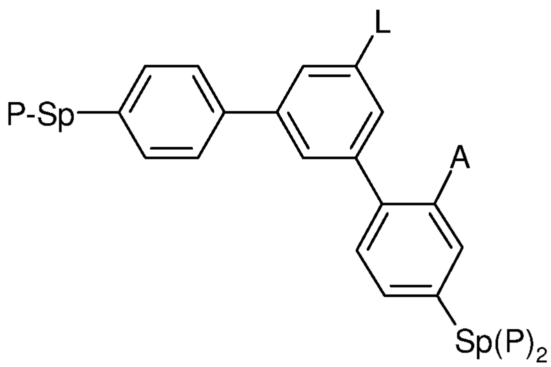

I5C-10-4

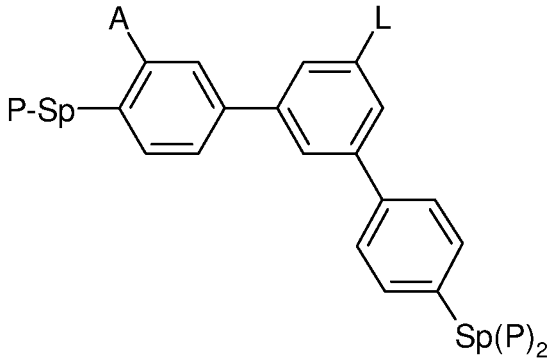

I5C-11-1

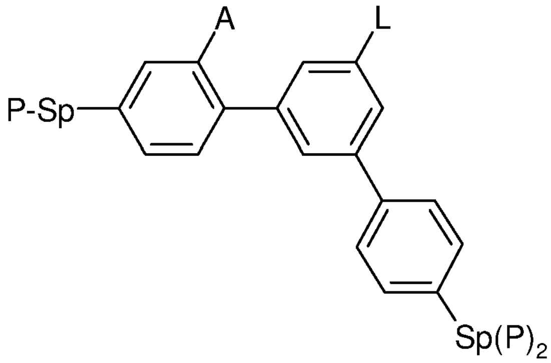

I5C-11-2

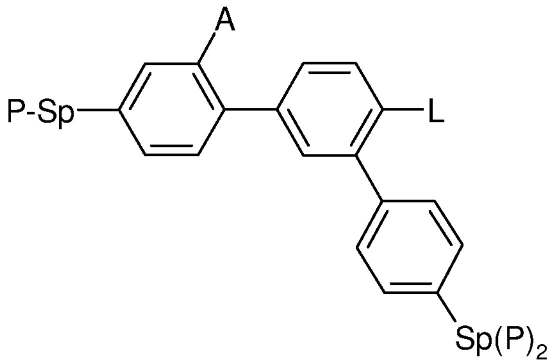

I5C-11-3

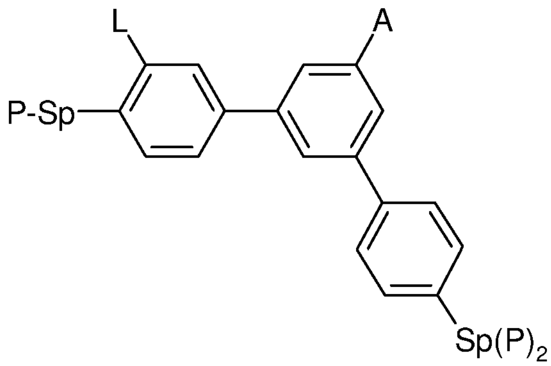

I5C-12-1

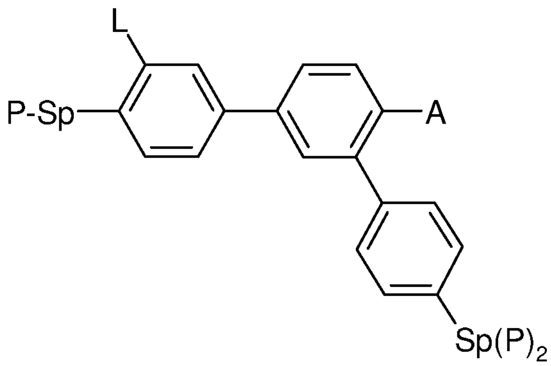

I5C-12-2

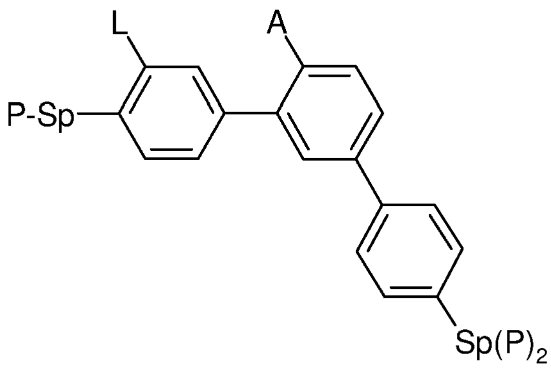

I5C-12-3

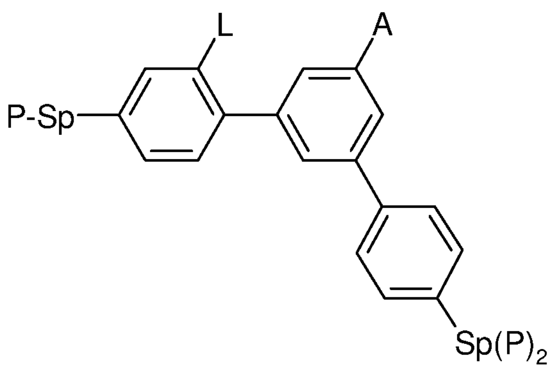

I5C-12-4

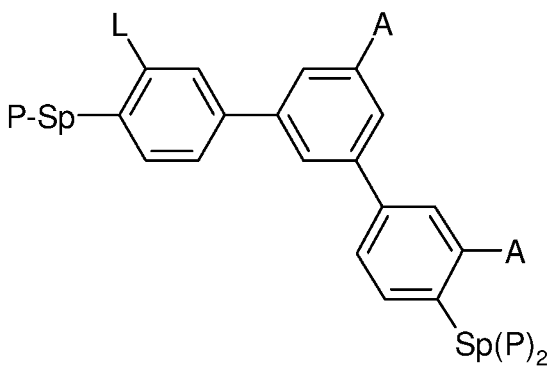

I5C-13-1

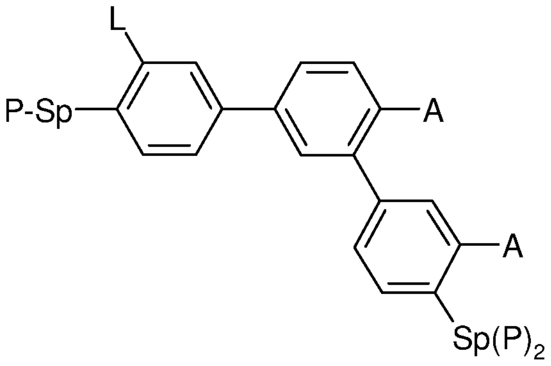

I5C-13-2

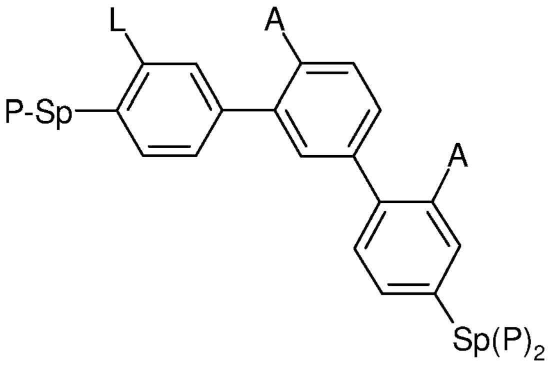

I5C-13-3

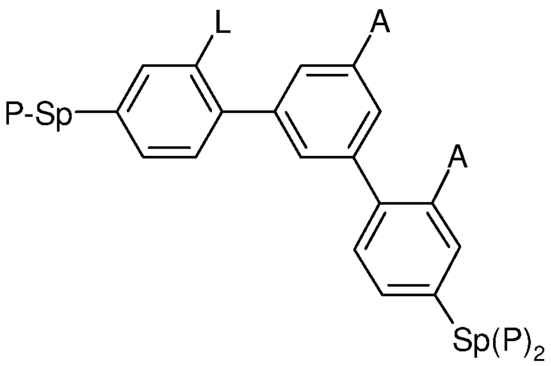

I5C-13-4

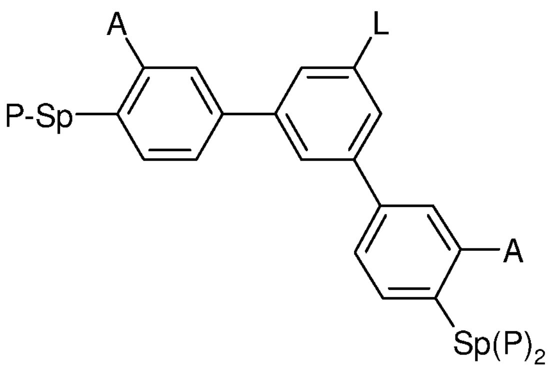

I5C-14-1

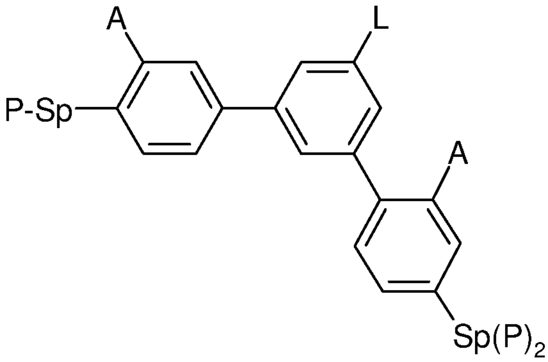

I5C-14-2

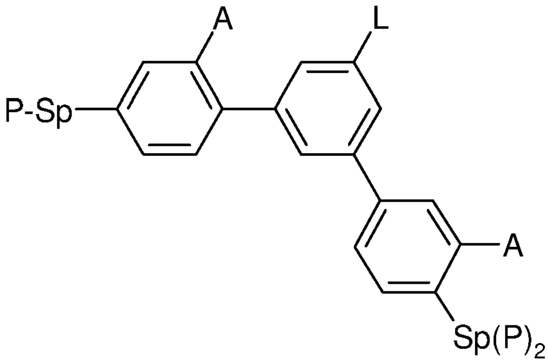

I5C-14-3

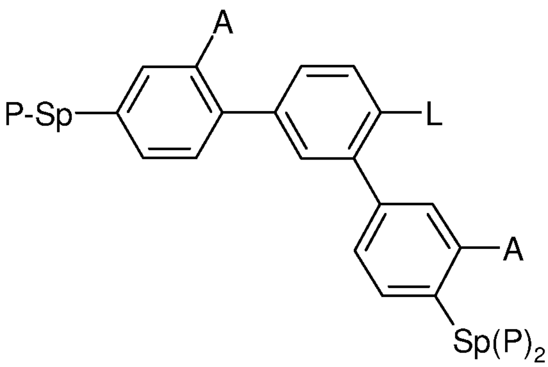

I5C-14-4

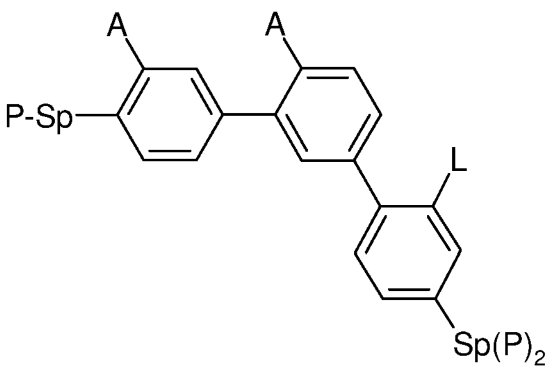

I5C-15-1

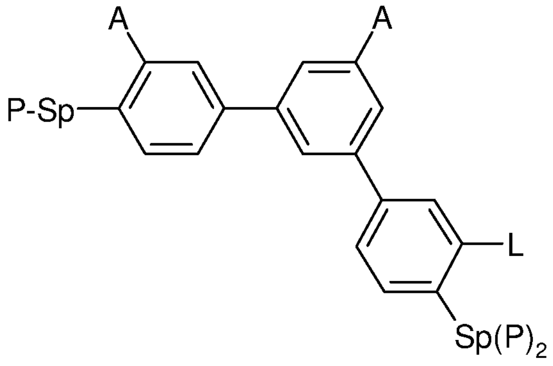

I5C-15-2

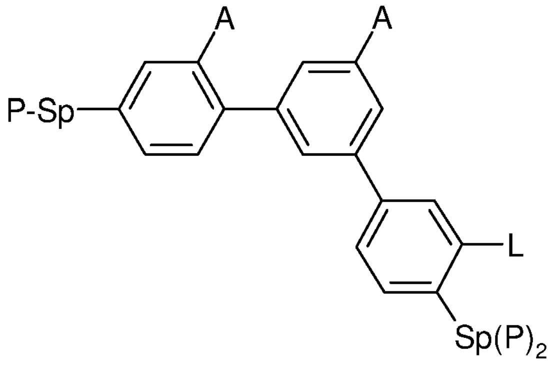

I5C-15-3

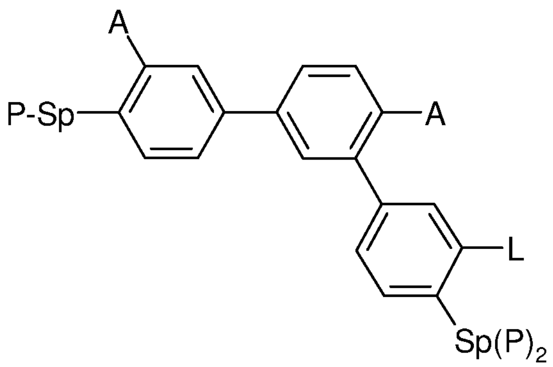

I5C-15-4

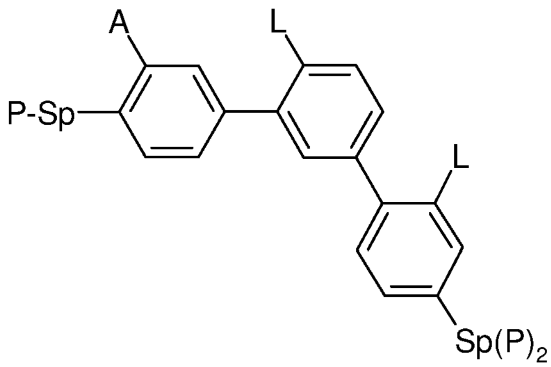

I5C-16-1

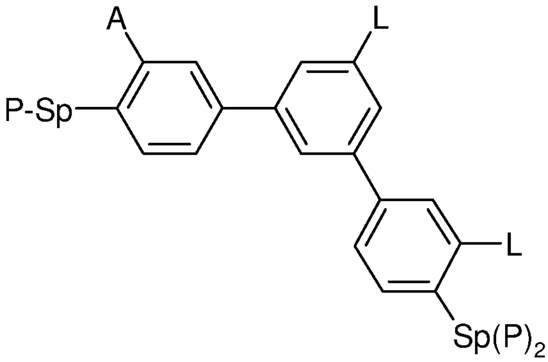

I5C-16-2

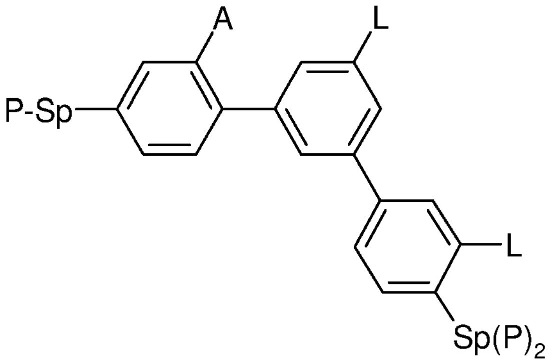

I5C-16-3

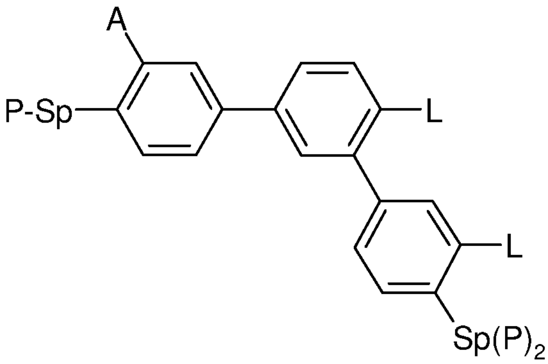

I5C-16-4

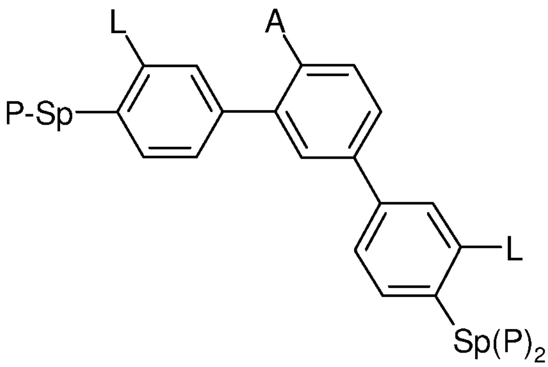

I5C-17-1

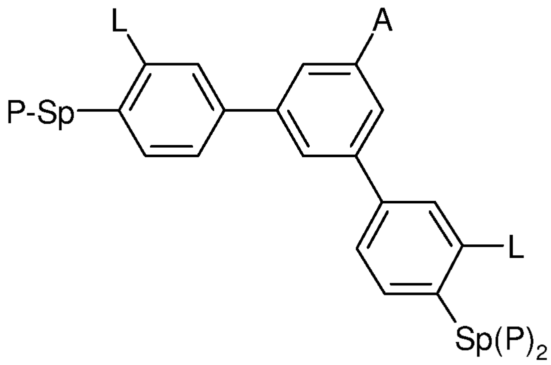

I5C-17-2

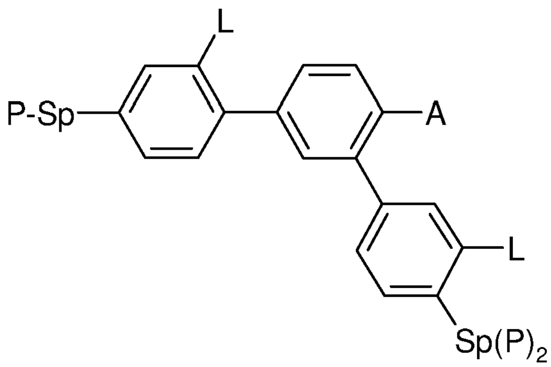

I5C-17-3

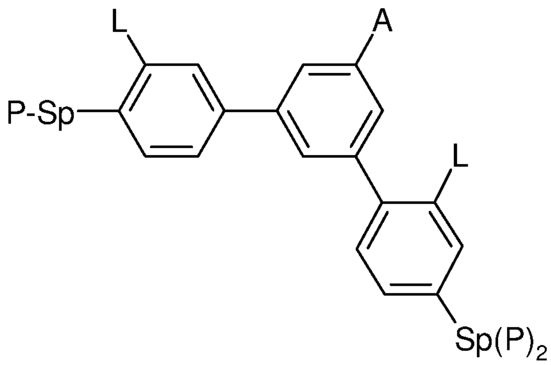

I5C-17-4

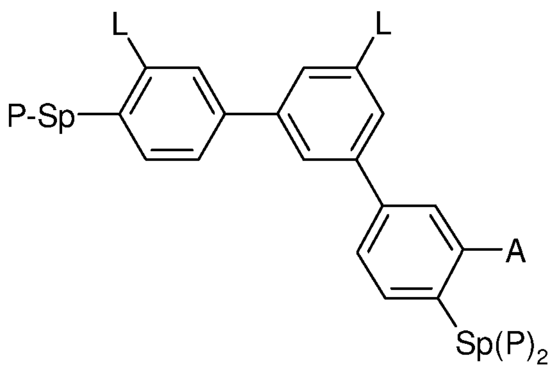

I5C-18-1

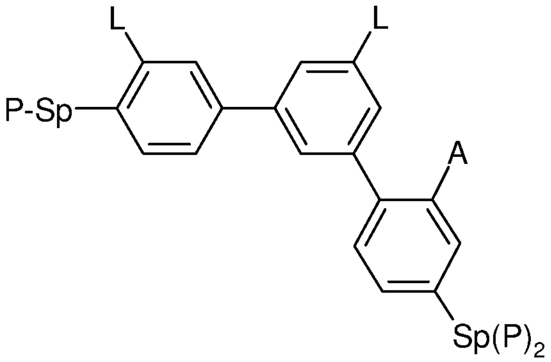

I5C-18-2

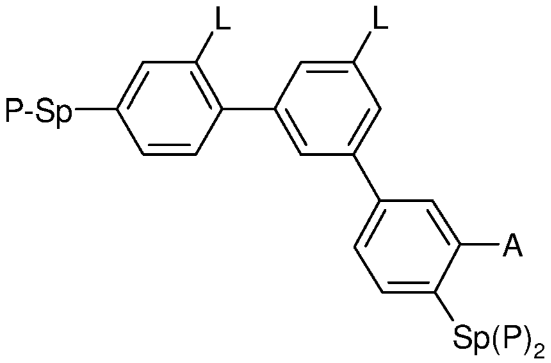

I5C-18-3

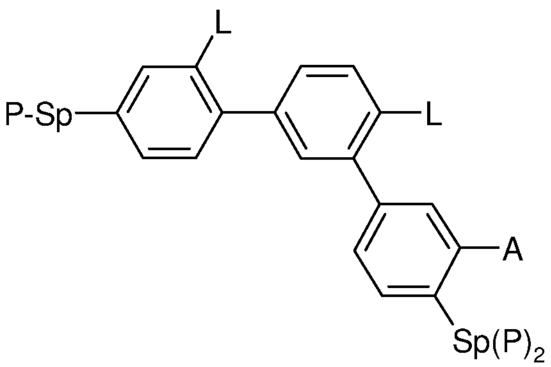

I5C-18-4

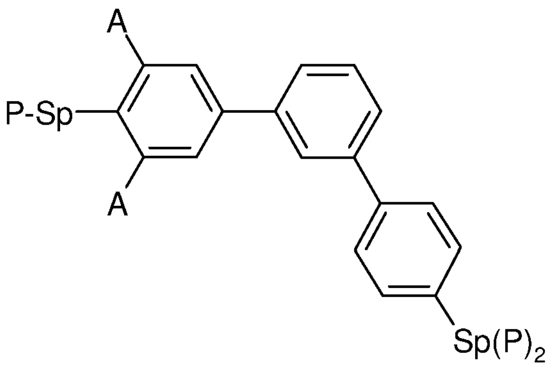

I5C-19-1

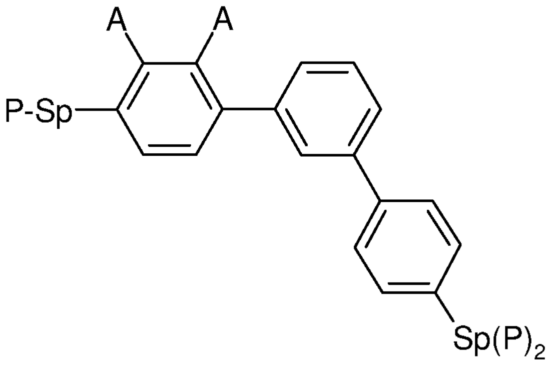

I5C-19-2

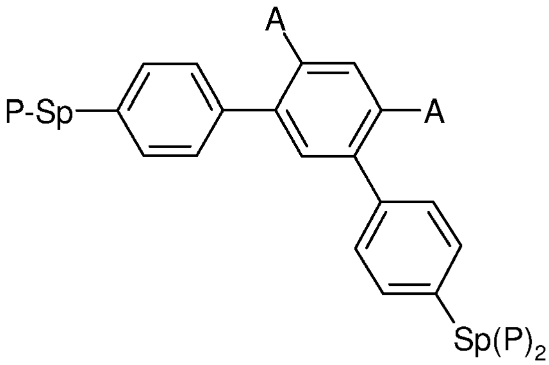

I5C-20-1

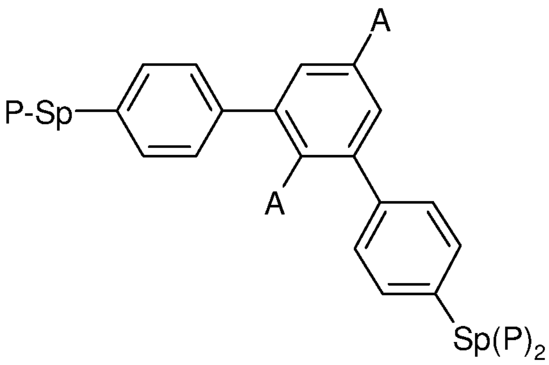

I5C-20-2

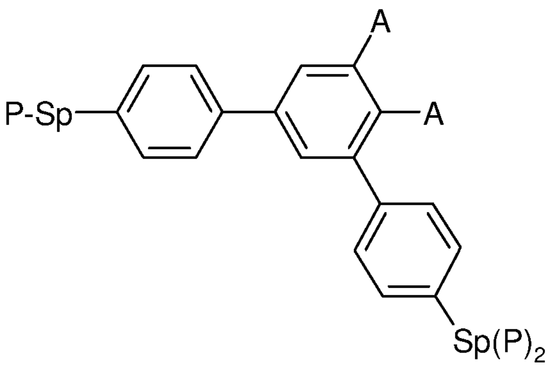

I5C-20-3

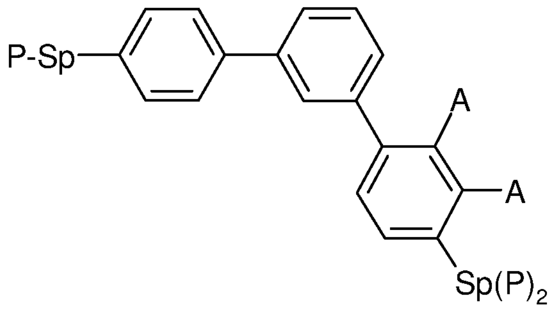

I5C-21-1

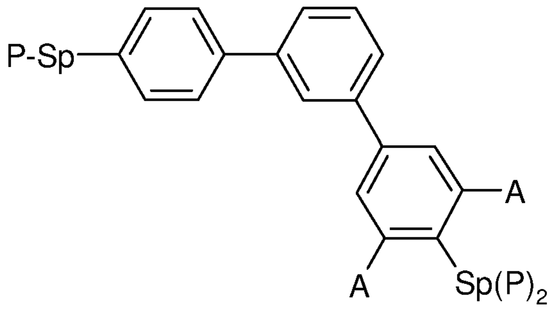

I5C-21-2

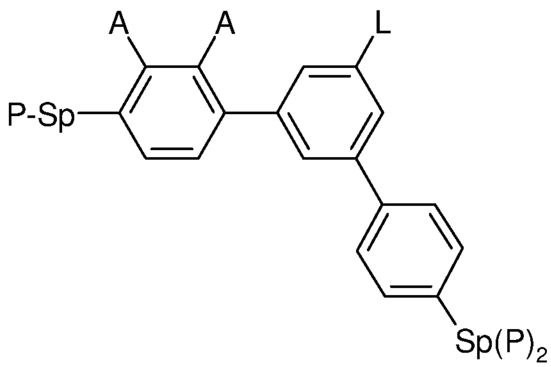

I5C-22-1

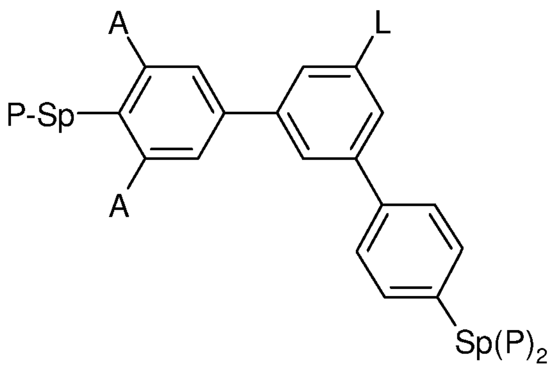

I5C-22-2

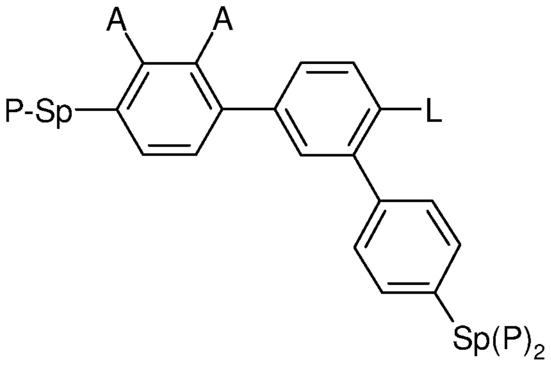

I5C-22-3

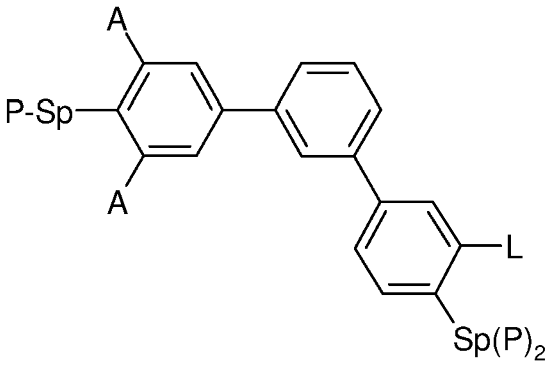

I5C-23-1

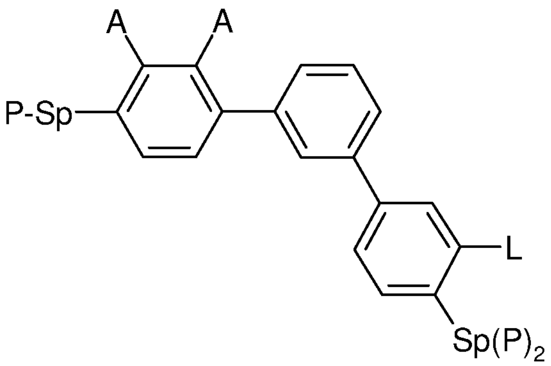

I5C-23-2

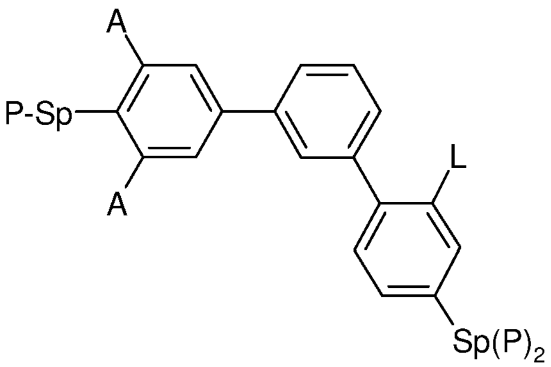

I5C-23-3

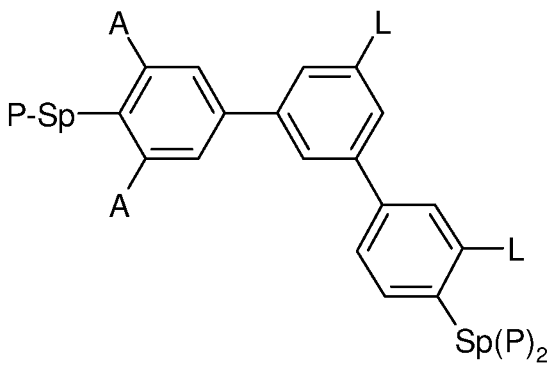

I5C-24-1

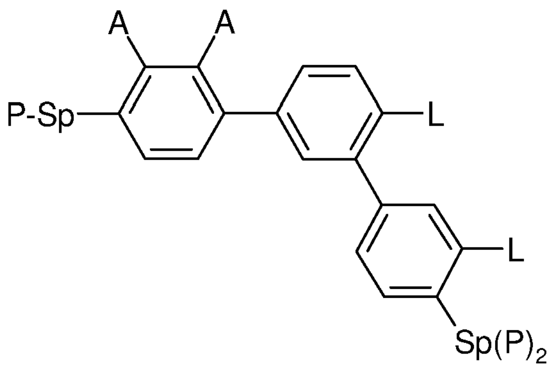

I5C-24-2

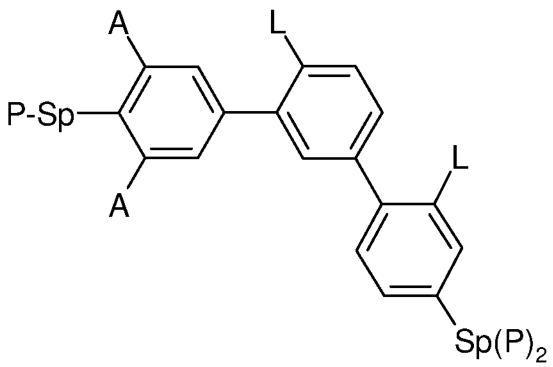

I5C-24-3

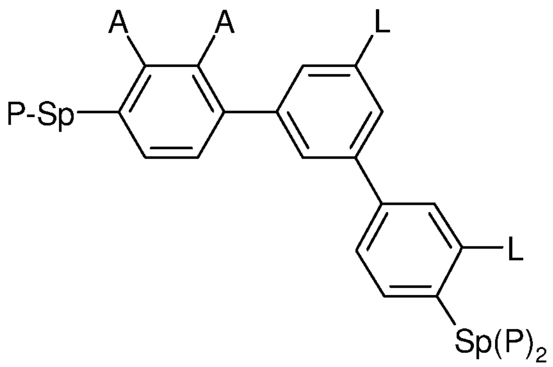

I5C-24-4

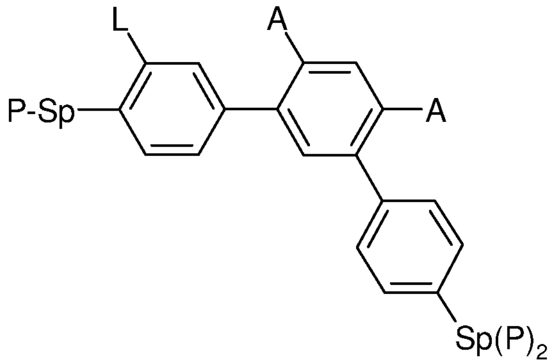

I5C-26-1

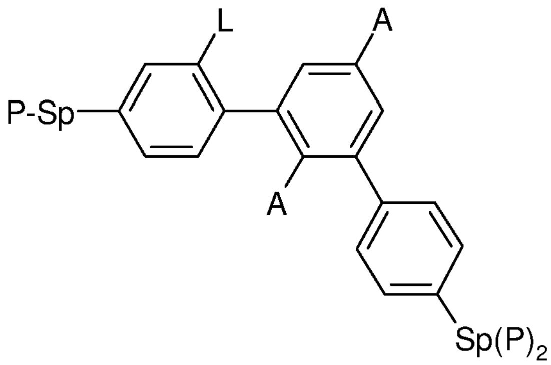

I5C-26-2

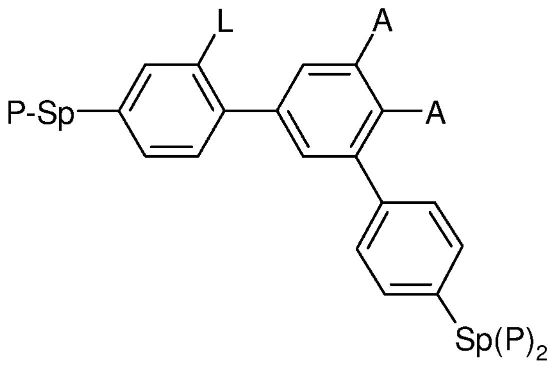

I5C-26-3

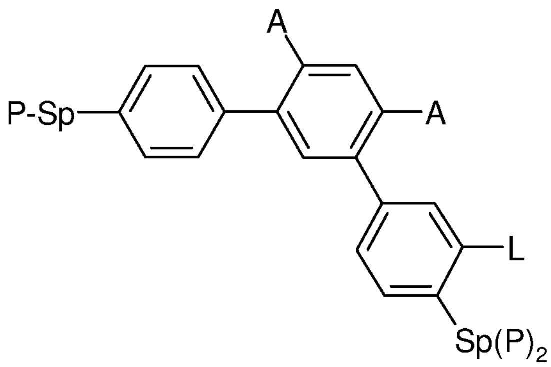

I5C-27-1

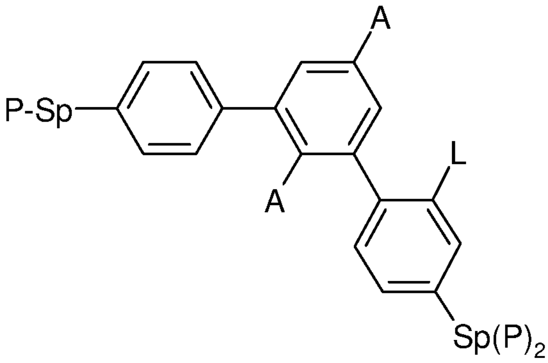

I5C-27-2

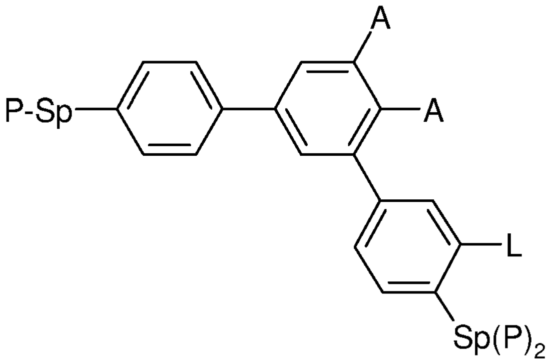

I5C-27-3

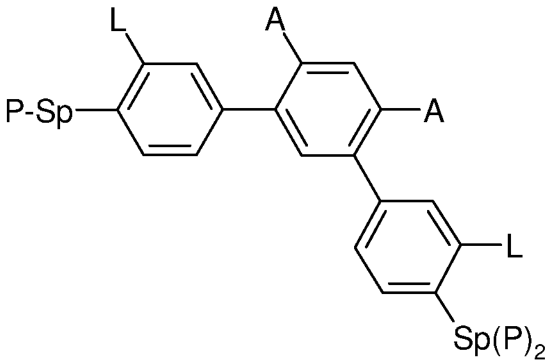

I5C-28-1

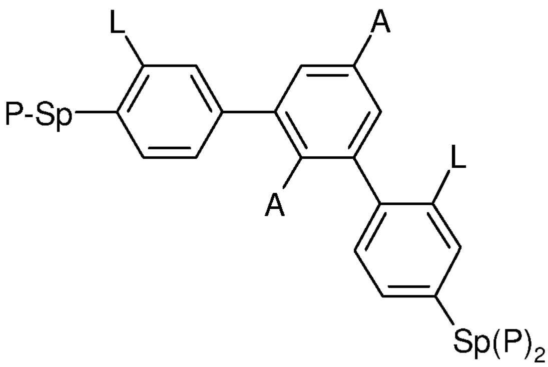

I5C-28-2

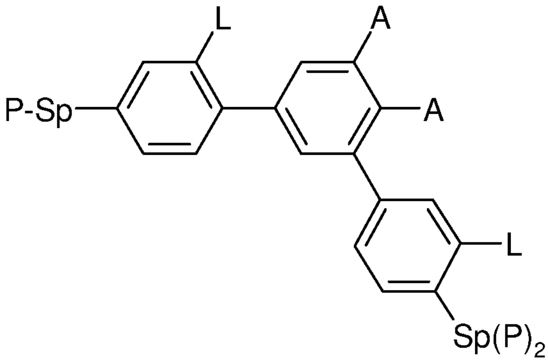

I5C-28-3

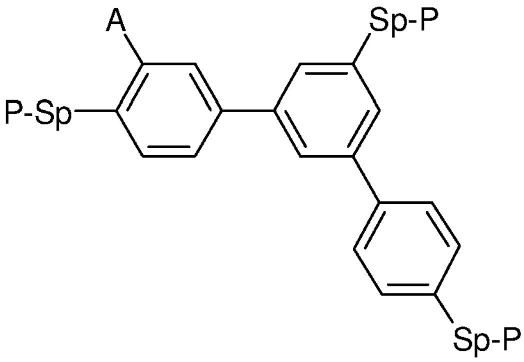

I5D-1-1

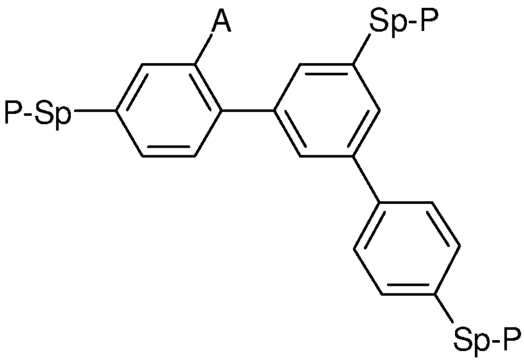

I5D-1-2

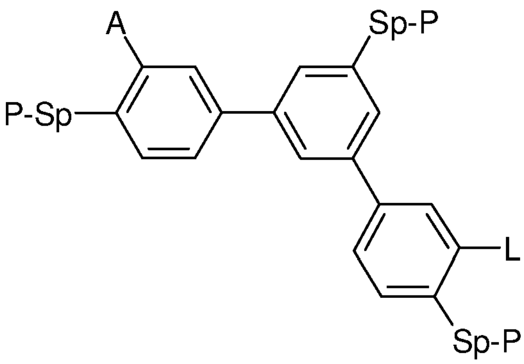

I5D-2-1

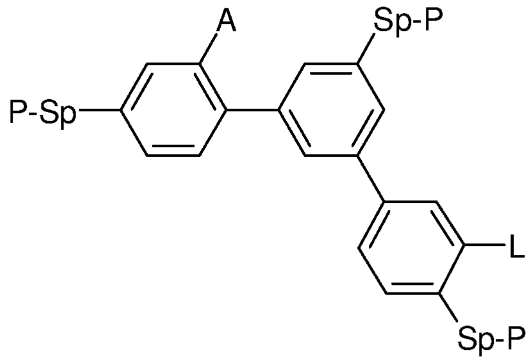

I5D-2-2

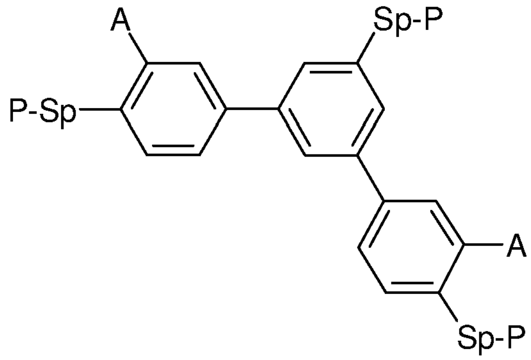

I5D-3-1

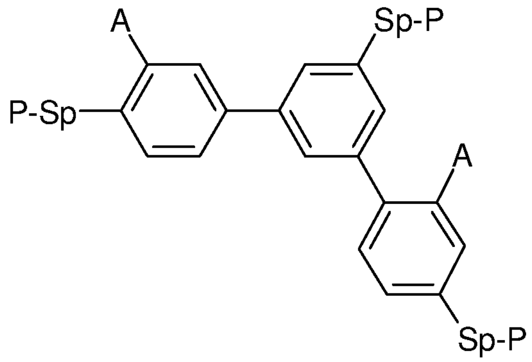

I5D-3-2

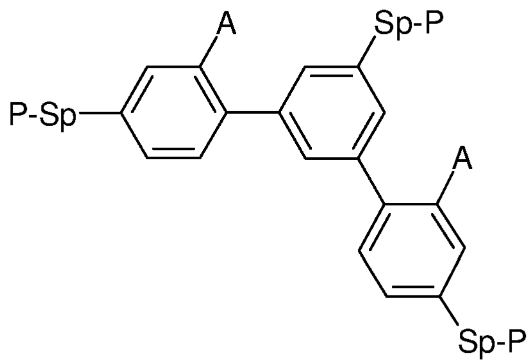

I5D-3-3

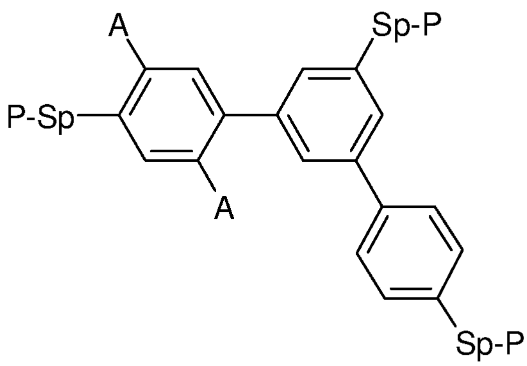

I5D-4-1

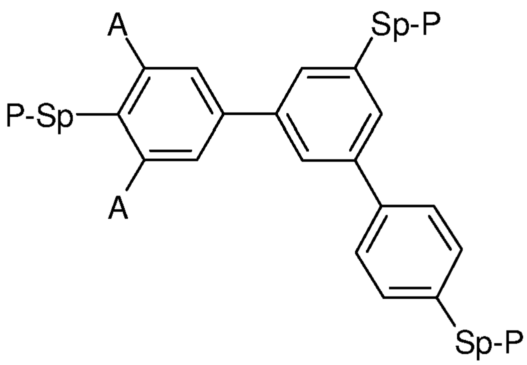

I5D-4-2

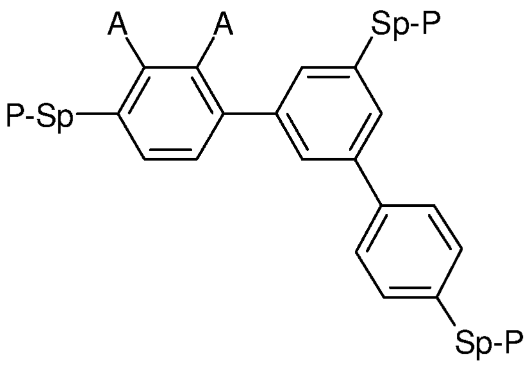

I5D-4-3

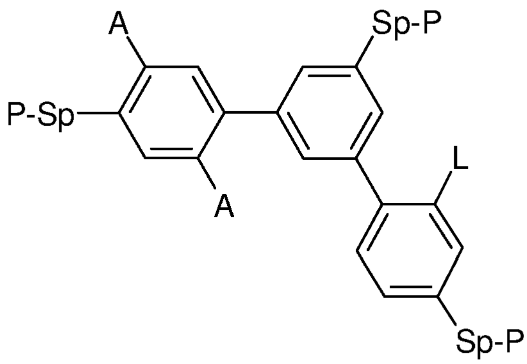

I5D-5-1

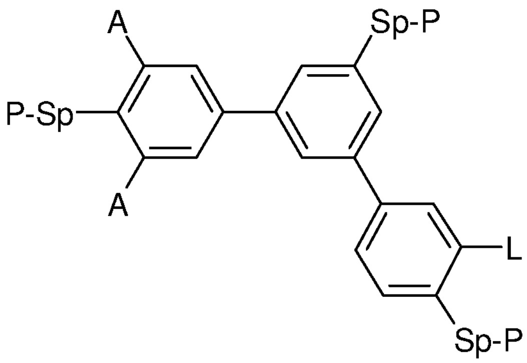

I5D-5-2

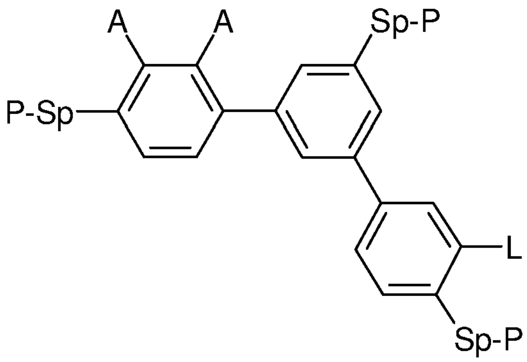

I5D-5-3

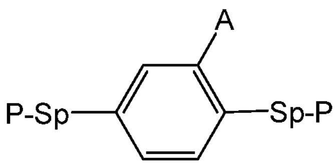

I6A-1-1

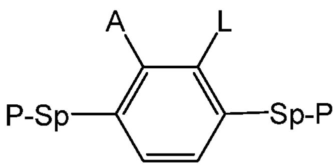

I6A-2-1

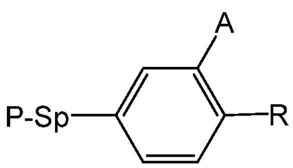

I6B-1-1

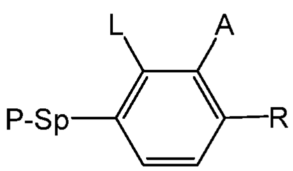

I6B-2-1

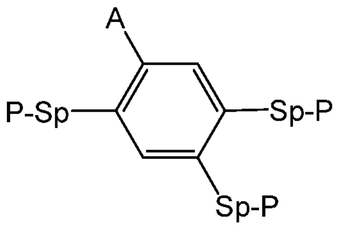

I6C-1-1

wherein A, L, R, P, Sp and $Sp(P)_2$ have the meanings given in formula I or one of the preferred meanings given above and below, and A is preferably thioalkyl with 1 to 7 C atoms which is preferably straight-chain, more preferably $-SCH_3$, $-SC_2H_5$ or $-SC_3H_7$, very preferably $-SCH_3$, further preferably $-CH_2S-CH_3$ or $-CH_2-S-C_2H_5$.

Very preferred are compounds selected from the group consisting of formulae I1A-1-1 to I2D-30-4.

Preferred are compounds of the formulae I1A-1-1 to I1B-8-6, I1D-1-1 to I2C-15-4, I2E-1-1 to I5B-9-4 and I5D-1-1 to I5D-5-3.

Further preferred are compounds of the formulae I1A-1-1 to I1A-7-3, I2A-1-1 to I2A-18-12, I5A-1-1 to I5A-19-3 and I6A-1-1 to I6B-2-1 wherein all groups Sp are a single bond. Further preferred are compounds of the formulae I1A-1-1 to I1A-7-3, I2A-1-1 to I2A-18-2, I5A-1-1 to I5A-19-3 and I6A-1-1 to I6B-2-1 wherein one of the groups Sp denotes a single bond and the other group Sp is different from a single bond.

Further preferred are compounds of the formulae I1B-1-1 to I1B-8-6, I1D-1-1 to I1G-3-1, I2B-1-1 to I2C-15-4, I2E-1-1 to I2G-4-1, I5B-1-1 to I5B-9-4, I5D-1-1 to I5D-5-3 and I6C-1-1 wherein all groups Sp are a single bond. Further preferred are compounds of the formulae I1B-1-1 to I1B-8-6, I1D-1-1 to I1G-3-1, I2B-1-1 to I2C-15-4, I2E-1-1 to I2G-4-1, I5B-1-1 to I5B-9-4, I5D-1-1 to I5D-5-3 and I6C-1-1 wherein one or two of the groups Sp denote a single bond and the other groups Sp are different from a single bond. Further preferred are compounds of the formulae I1B-1-1 to I1B-8-6, I1D-1-1 to I1G-3-1, I2B-1-1 to I2C-15-4, I2E-1-1 to I2G-4-1, I5B-1-1 to I5B-9-4, 15D-1-1 to I5D-5-3 and I6C-1-1 wherein one or two of the groups Sp are different from a single bond and the other groups Sp denote a single bond.

Further preferred are compounds of the formulae I1C-1-1 to I1C-13-3, I2D-1-1 to I2D-30-4 and I5C-1-1 to I5C-28-3 wherein in the radical P-Sp the group Sp is a single bond. Further preferred are compounds of the formulae I1C-1-1 to I1C-13-3, I2D-1-1 to I2D-30-4 and I5C-1-1 to I5C-28-3 wherein all groups Sp are different from a single bond

Further preferred are compounds of the formulae I1A-1-1 to I6C-1-1 are those wherein A denotes thioalkyl with 1 to 7 C atoms which is preferably straight-chain, more preferably $-SCH_3$, $-SC_2H_5$ or $-SC_3H_7$, most preferably $-SCH_3$, further preferably $-CH_2S-CH_3$ or $-CH_2-S-C_2H_5$.

Further preferred are compounds of the formulae I1A-1-1 to I6C-1-1 wherein L denotes F, Cl, CN or $OCH_3$, very preferably F.

Further preferred are compounds of the formulae I1A-1-1 to I6C-1-1 wherein P denotes acrylate or methacrylate, very preferably methacrylate.

Further preferred are compounds of the formulae I1A-1-1 to I6C-1-1 wherein Sp, when being different from a single bond, denotes alkylene with 2 to 6 C atoms.

Further preferred are compounds of the formulae I1A-1-1 to I6C-1-1 where all groups Sp denote a single bond, all groups P denote methacrylate, all groups A denote $S-CH_3$, and all groups L denote F.

Preferred compounds of formula I and II and their subformulae are selected from the following preferred embodiments, including any combination thereof:

- the compounds contain one group A,
- the compounds contain two or more groups A,
- the compounds contain one or more groups A and one or more groups L,
- the compounds contain two unfused or fused, preferably unfused, benzene rings,
- the compounds contain three or more, preferably three or four unfused or fused benzene rings,
- the compounds contain at least one benzene ring that is not substituted by A or L,
- A is thioalkyl with 1 to 7 C atoms which is preferably straight-chain, more preferably $-SCH_3$, $-SC_2H_5$ or $-SC_3H_7$, very preferably $-SCH_3$,

- A is $-CH_2S-CH_3$ or $-CH_2-S-C_2H_5$,
- the compounds contain exactly one polymerizable group (represented by the group P),
- the compounds contain exactly two polymerizable groups (represented by the groups P),
- the compounds contain exactly three polymerizable groups (represented by the groups P),
- the compounds contain exactly four polymerizable groups (represented by the groups P),
- P is selected from the group consisting of acrylate, methacrylate and oxetane, very preferably acrylate or methacrylate,
- P is methacrylate,
- Pg is a hydroxyl group,
- each of the groups Sp denotes a single bond,
- at least one of the groups Sp is different from a single bond,
- at least one of the groups Sp is a single bond and at least one of the groups Sp is different from a single bond,
- Sp, when being different from a single bond, is selected from - $(CH_2)_{p2}$-, $-(CH_2)_{p2}$-O-, $-(CH_2)_{p2}$-CO-O-, $-(CH_2)_{p2}$-O-CO-, wherein p2 is 2, 3, 4, 5 or 6, and the O-atom or the CO-group, respectively, is connected to the benzene ring,
- Sp, when being different from a single bond, is selected from $-(CH_2)_2$- , $-(CH_2)_3$-, $-(CH_2)_4$-, -O-$(CH_2)_2$-, -O-$(CH_2)_3$-, -O-CO-$(CH_2)_2$ and -CO-O-$(CH)_2$-, wherein the O atom or the CO group is attached to the benzene ring
- Sp is a single bond or denotes $-(CH_2)_{p2}$-, $-(CH_2)_{p2}$-O-, $-(CH_2)_{p2}$-CO-O-, $-(CH_2)_{p2}$-O-CO-, wherein p2 is 2, 3, 4, 5 or 6, and the O-atom or the CO-group, respectively, is connected to the benzene ring,
- $Sp(P)_2$ is selected from subformulae Sp1a-Sp3a,
- $R^b$ denotes P-Sp-,
- $R^b$ does not denote or contain a polymerizable group,
- $R^b$ denotes denotes F, Cl, CN or straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F or Cl,
- R denotes F, Cl, CN or straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F or Cl,
- $Z^1$ is a single bond,
- z is 0, 1, 2 or 3, very preferably 0 or 1,
- L is selected from the group consisting of F, Cl, CN, alkyl, alkoxy, alkylcarbonyl, alkoxycarbonyl, alkylcarbonyloxy or alkoxycarbonyloxy each having 1 to 6 C atoms, in which one or more H atoms may optionally be replaced by F or Cl, preferably F, Cl, CN or $OCH_3$, very preferably F.

Very preferred compounds of formula I and its subformulae are selected from the following subformulae:

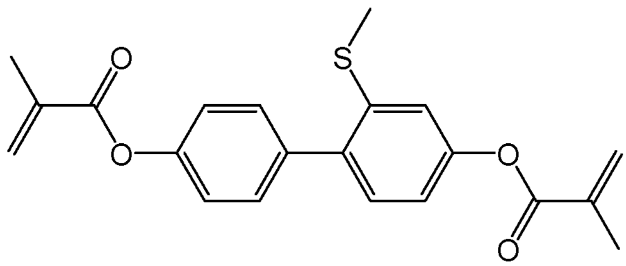

I1A-1-1a

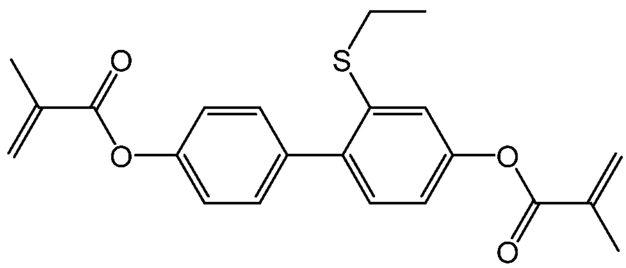

I1A-1-1b

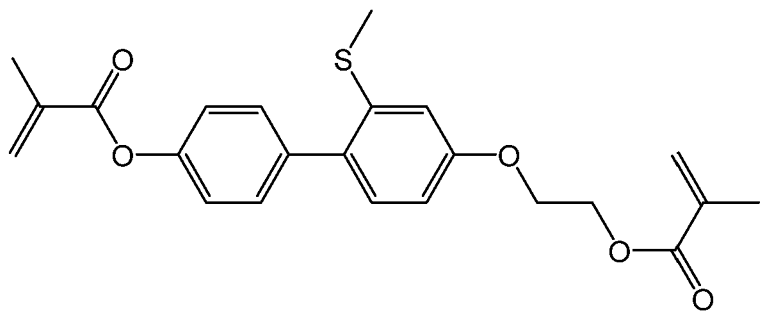

I1A-1-1c

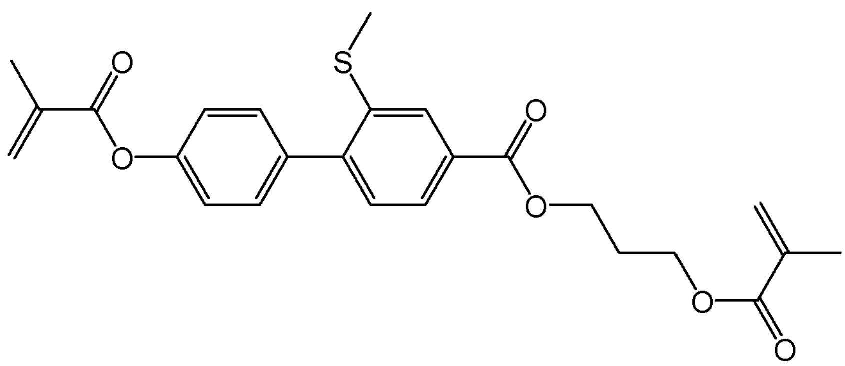

I1A-1-1d

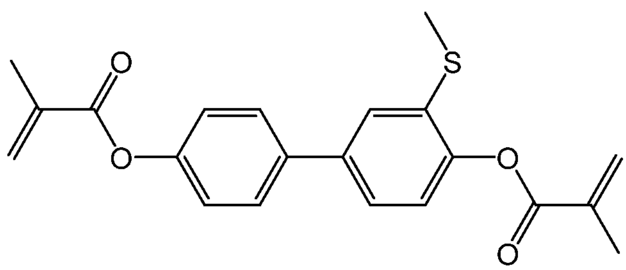

I1A-1-2a

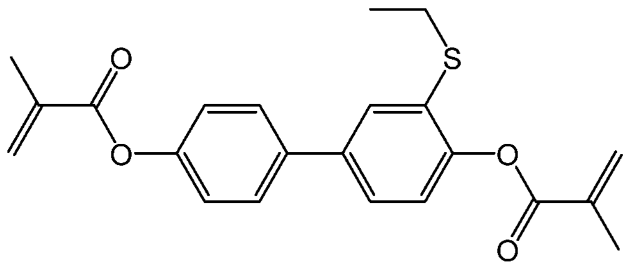

I1A-1-2b

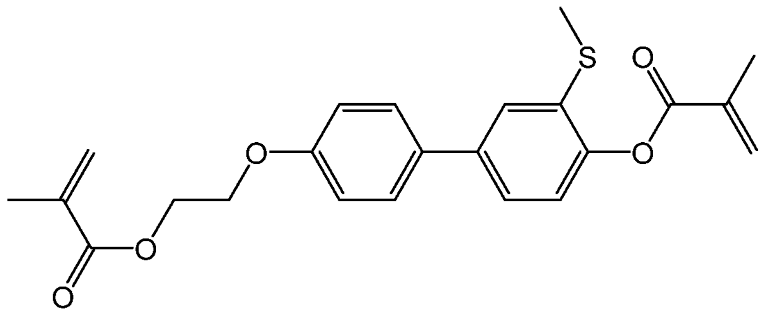

I1A-1-2c

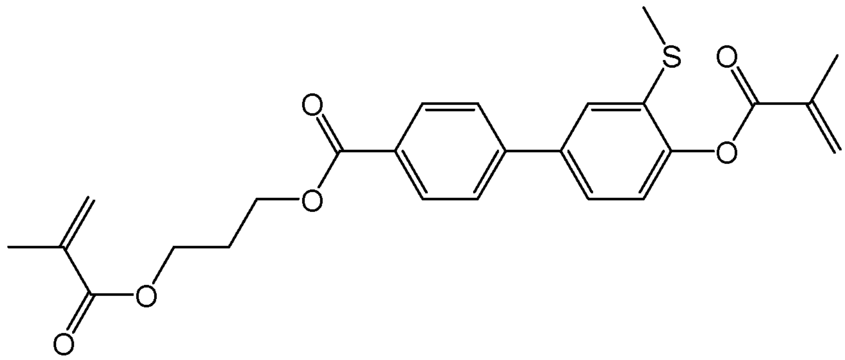

I1A-1-2d

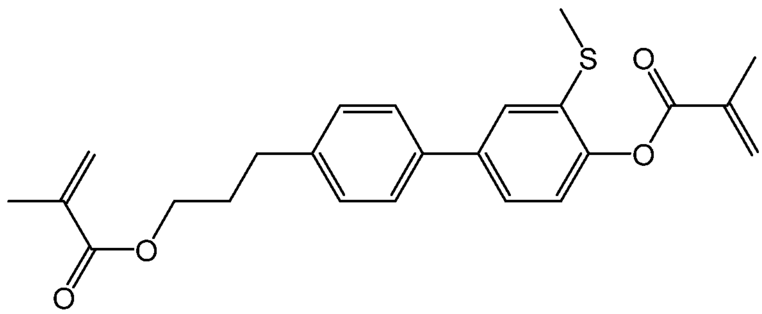

I1A-1-2e

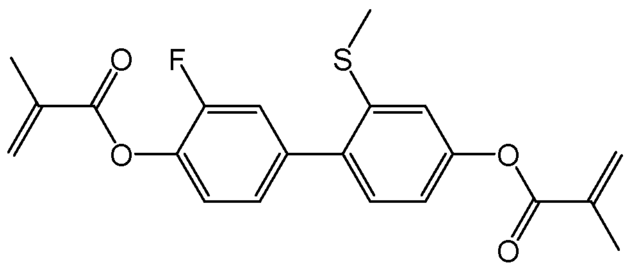

I1A-2-1a

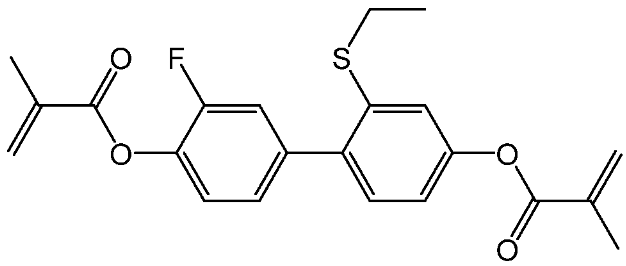

I1A-2-1b

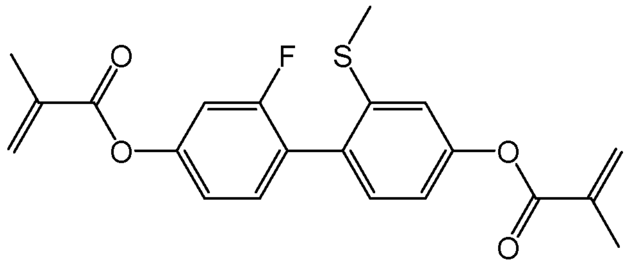

I1A-2-2a

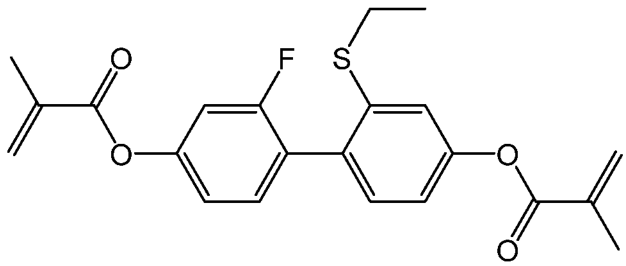

I1A-2-2b

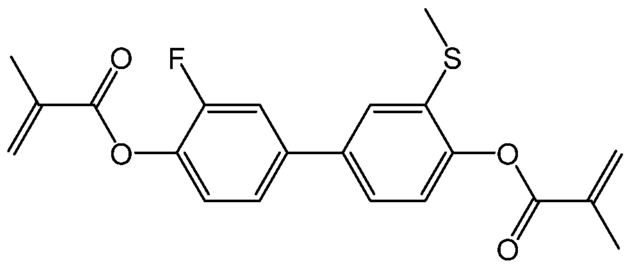

I1A-2-3a

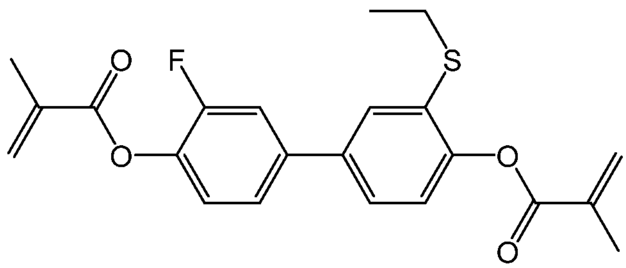

I1A-2-3b

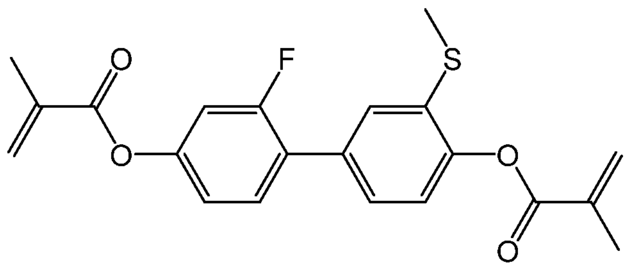

I1A-2-4a

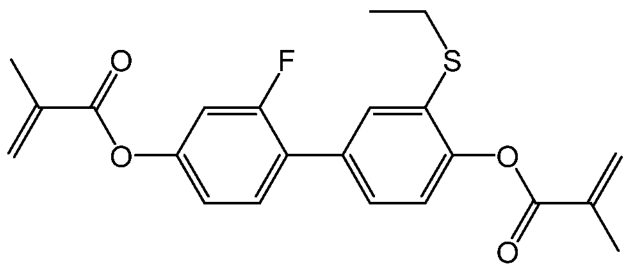

I1A-2-4b

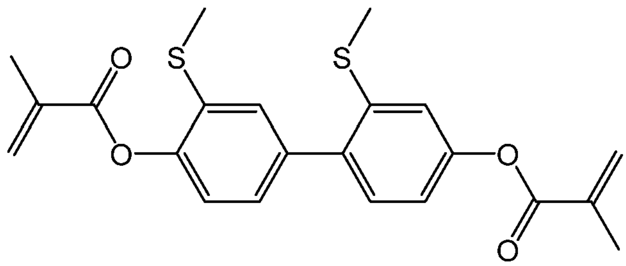

I1A-4-1a

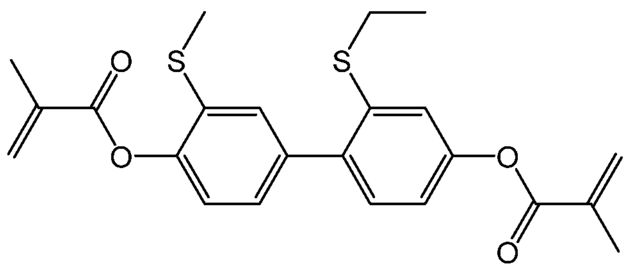

I1A-4-1b

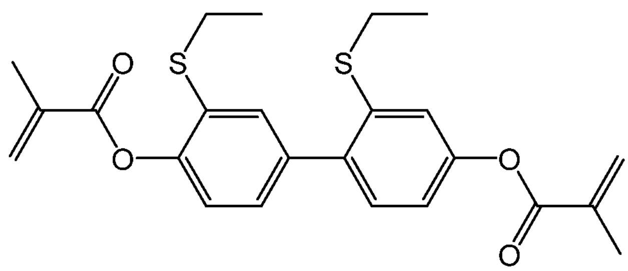

I1A-4-1c

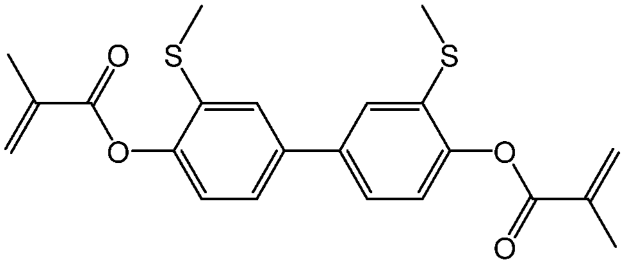

I1A-4-2a

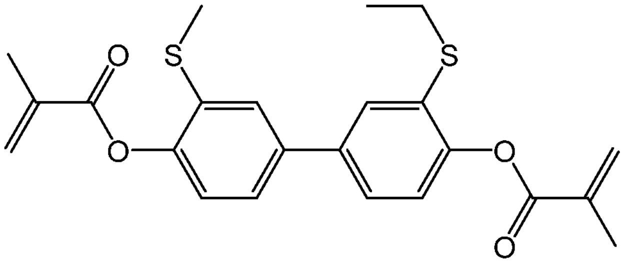

I1A-4-2b

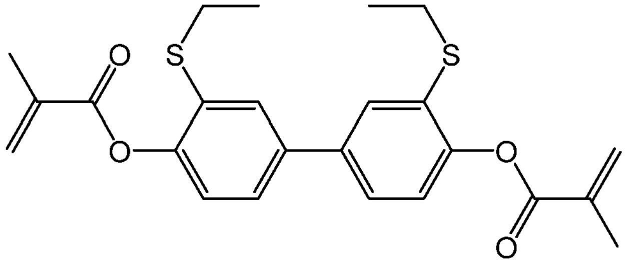

I1A-4-2c

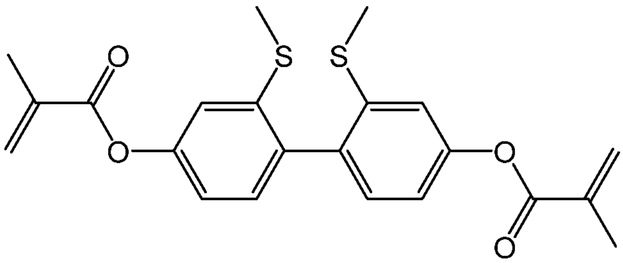

I1A-4-3a

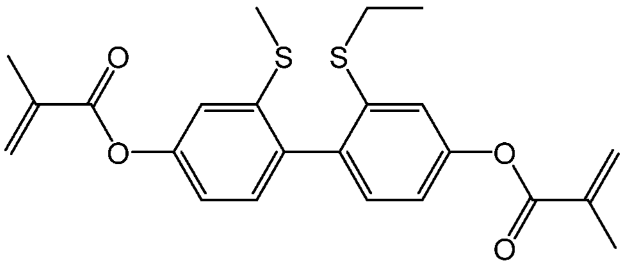

I1A-4-3b

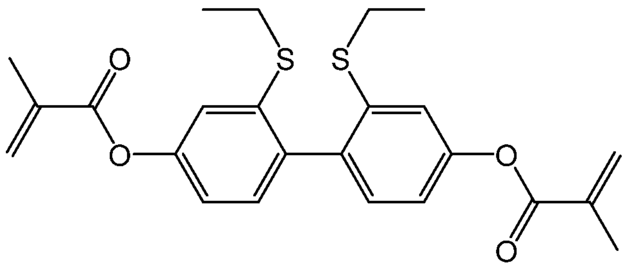

I1A-4-3c

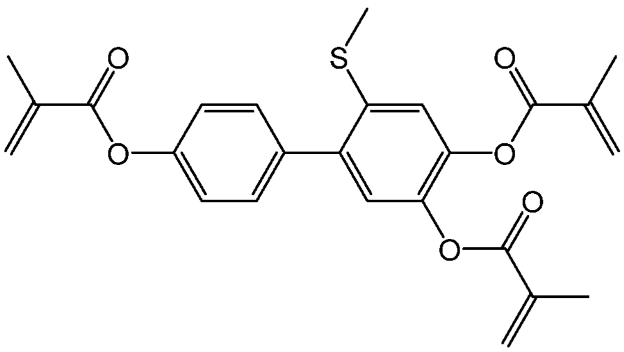

I1B-1-1a

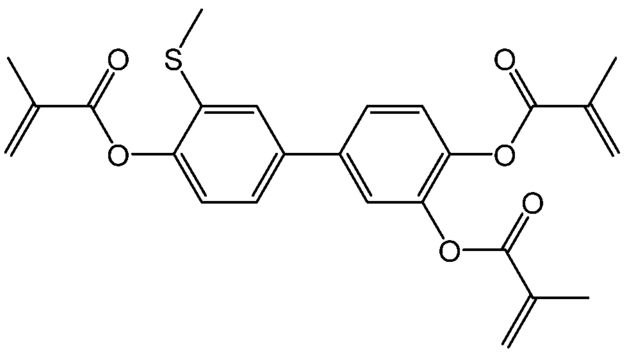

I1B-2-1a

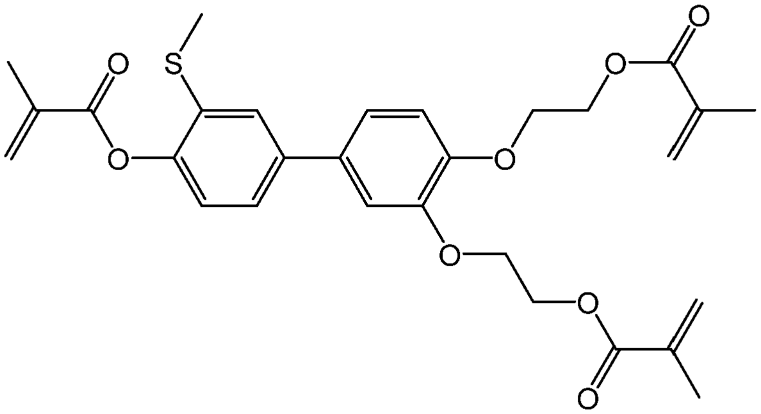

I1B-2-1b

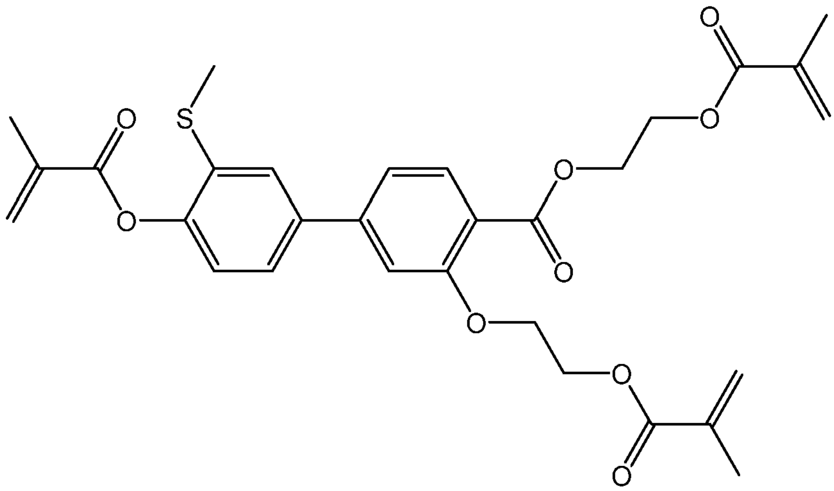

I1B-2-1c

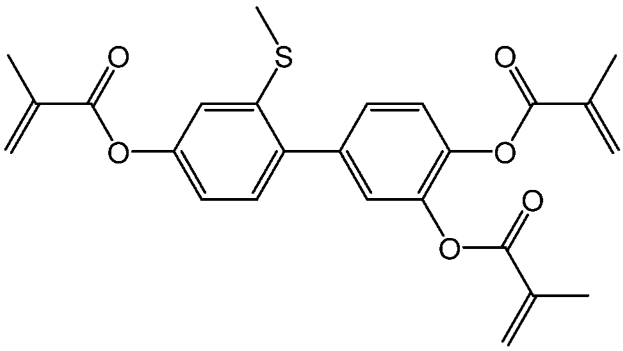

I1B-2-2a

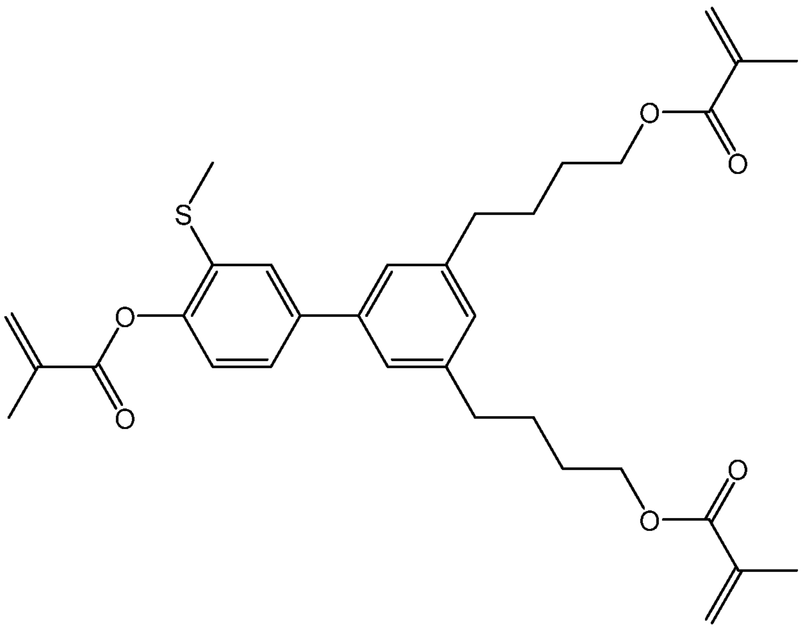

I1B-2-3a

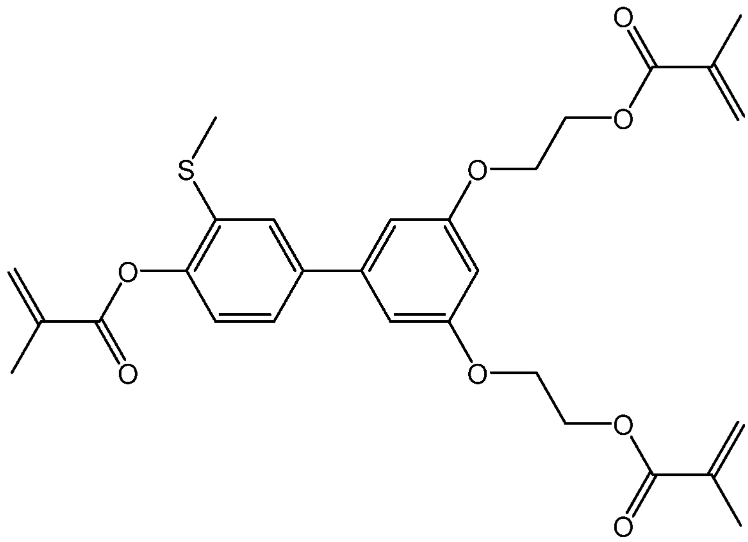

I1B-2-3b

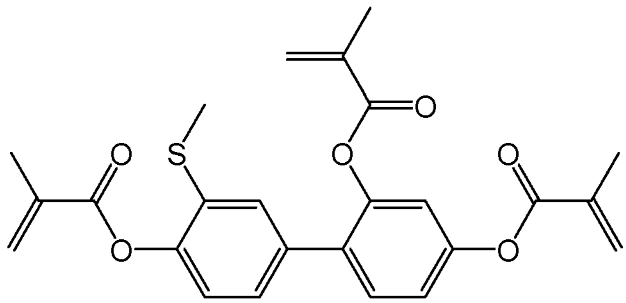

I1B-2-5a

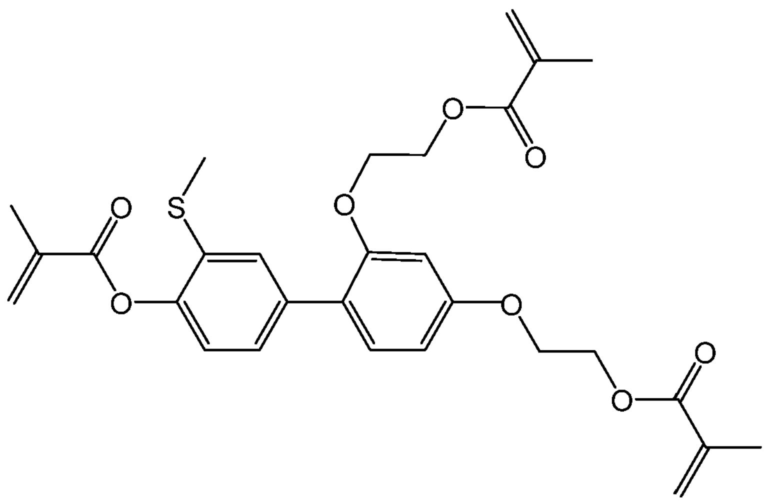

I1B-2-5b

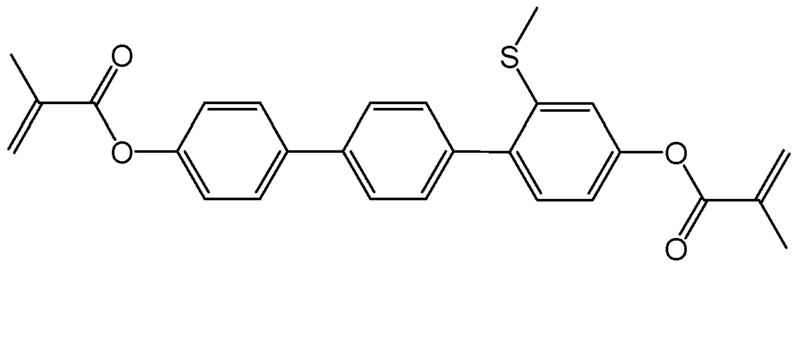

I2A-1-1a

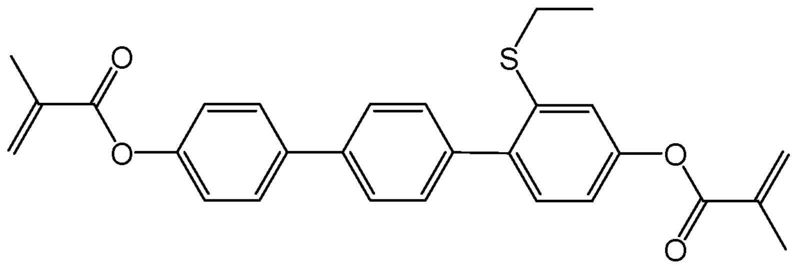

I2A-1-1b

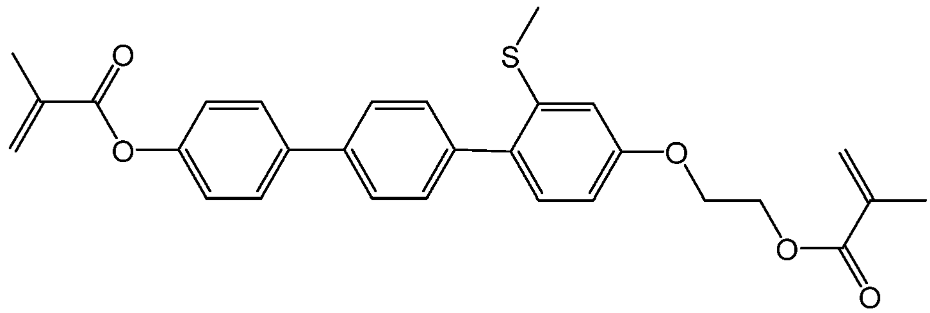

I2A-1-1c

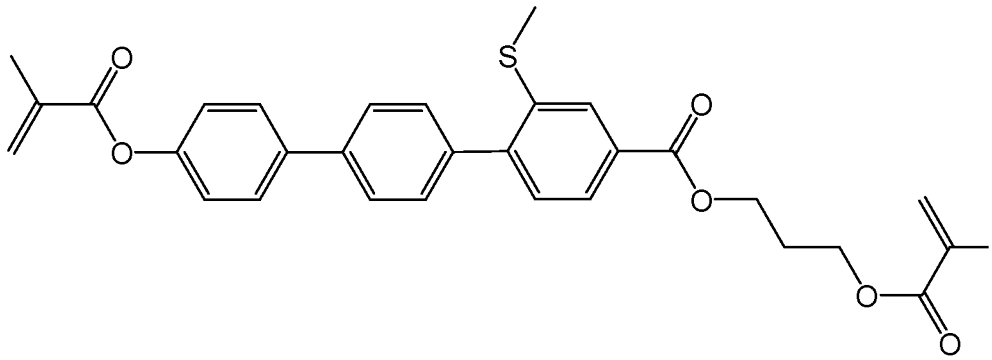

I2A-1-1d

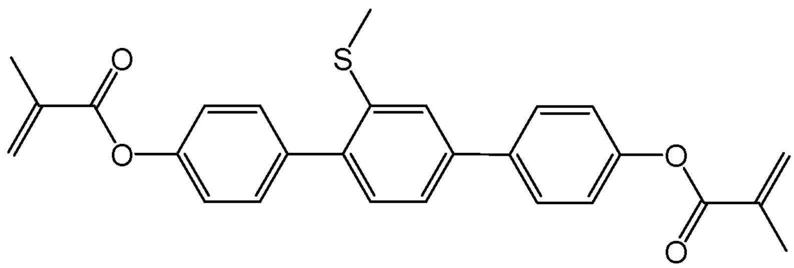

I2A-2-1a

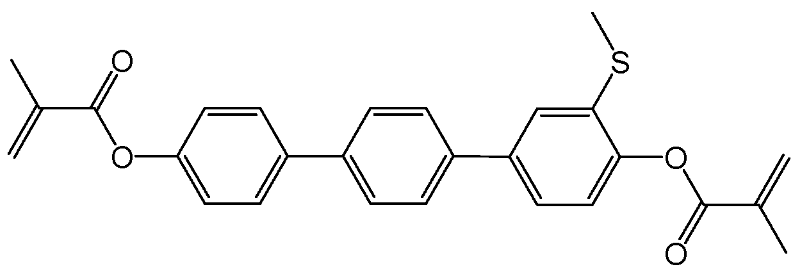

I2A-2-2a

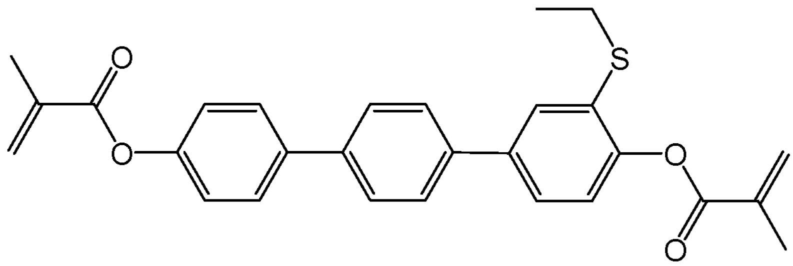

I2A-2-2b

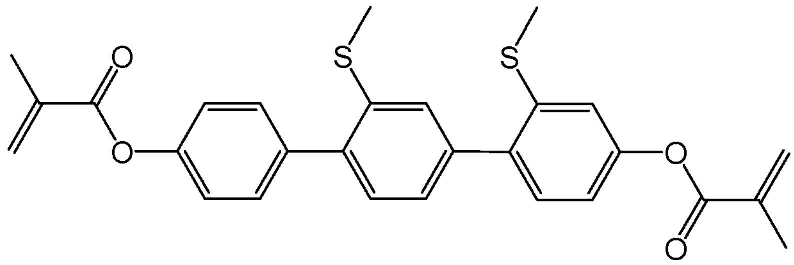

I2A-3-1a

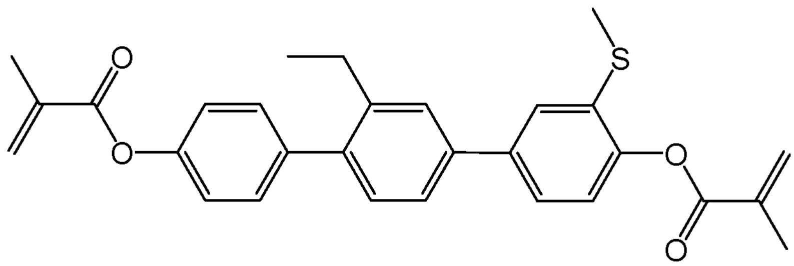

I2A-3-3a

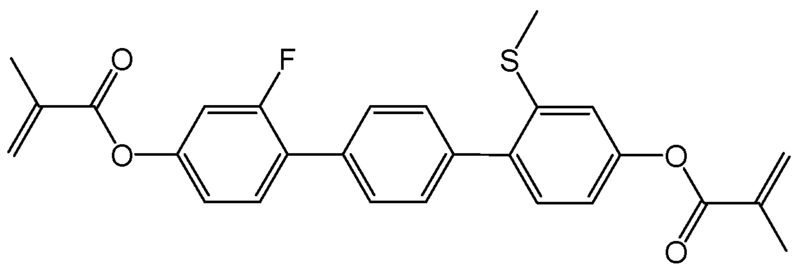

I2A-5-3a

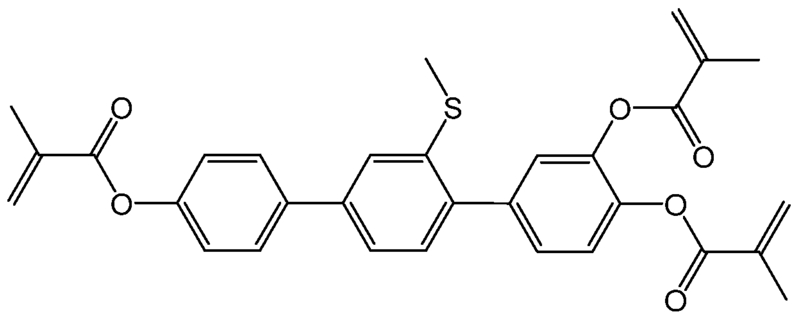

I2B-1-1a

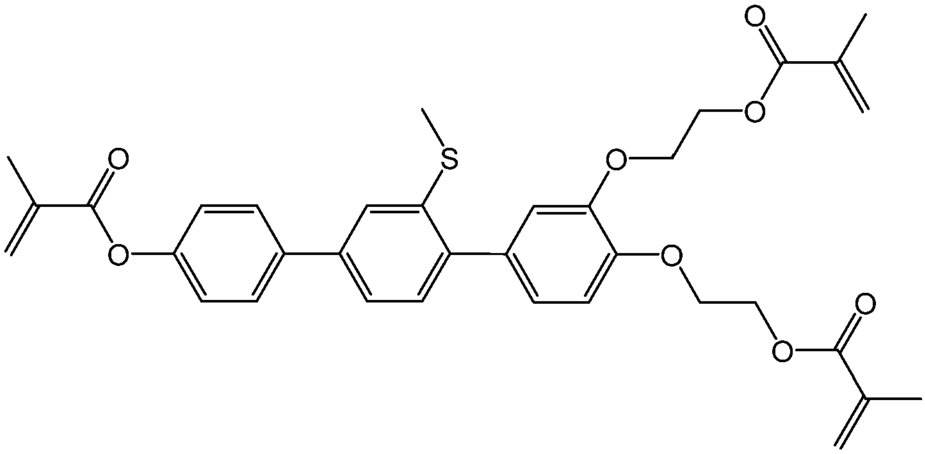

I2B-1-1b

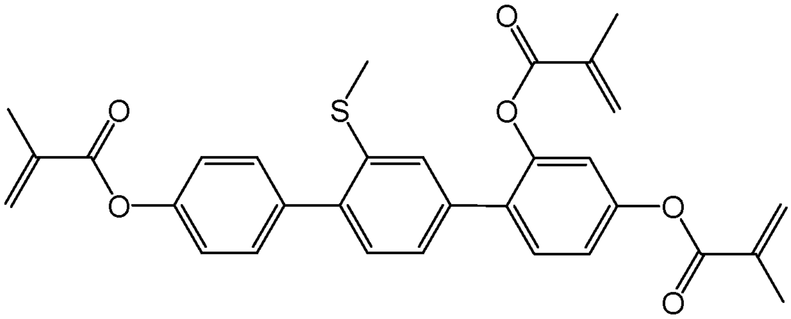

I2B-1-6a

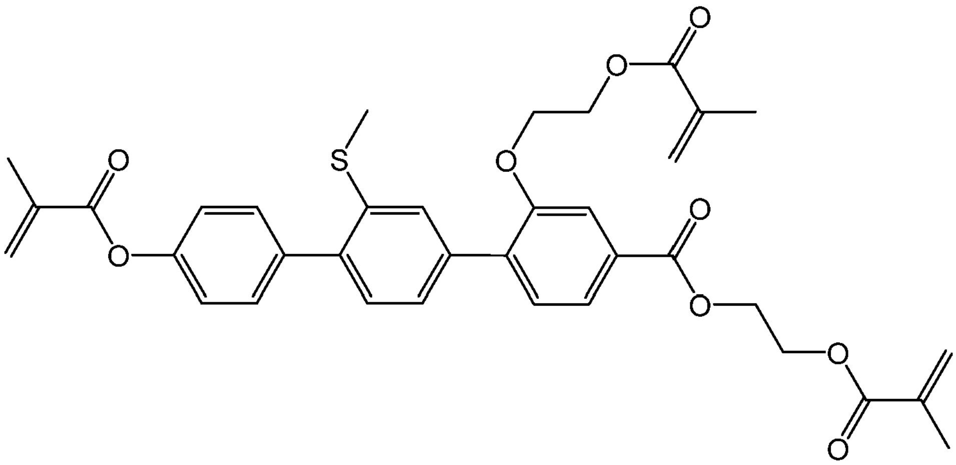

I2B-1-6b

Further preferred are compounds of formula I1A-1-1a to I2B-1-6b wherein one, two or three of the methacrylate groups are replaced by acrylate groups.

For use in PSA displays the total proportion of the polymerizable compounds of formula I and its subformulae in the LC medium is preferably from 0.01 to 2.0%, very preferably from 0.1 to 1.0%, most preferably from 0.2 to 0.8%.

For use in SA-VA displays the total proportion of the polymerizable compounds of formula I and its subformulae in the LC medium is preferably from > 0 to < 3%, very preferably from > 0 to < 2%, more preferably from 0.05 to 2.0, most preferably from 0.05 to 1.0%.

The compounds of the formulae I can be prepared analogously to processes known to the person skilled in the art and described in standard works of organic chemistry, such as, for example, in Houben-Weyl, Methoden der organischen Chemie [Methods of Organic Chemistry], Thieme-Verlag, Stuttgart.

For example, acrylic or methacrylic esters can be prepared by esterification of the corresponding alcohols with acid derivatives like, for example, (meth)acryloyl chloride or (meth)acrylic anhydride in the presence of a base like pyridine or triethyl amine, and 4-(*N*,*N*-dimethylamino)pyridine (DMAP). Alternatively the esters can be prepared by esterification of the alcohols with (meth)acrylic acid in the presence of a dehydrating reagent, for example according to

Steglich with dicyclohexylcarbodiimide (DCC), N (3-dimethylaminopropyl)-*N*'-ethylcarbodiimide (EDC) or *N*-(3-dimethylaminopropyl)-*N*'-ethylcarbodiimide hydrochloride and DMAP.

A further suitable and preferred general synthesis methods for the compounds of formula I is shown below in Scheme 1.

Scheme 1

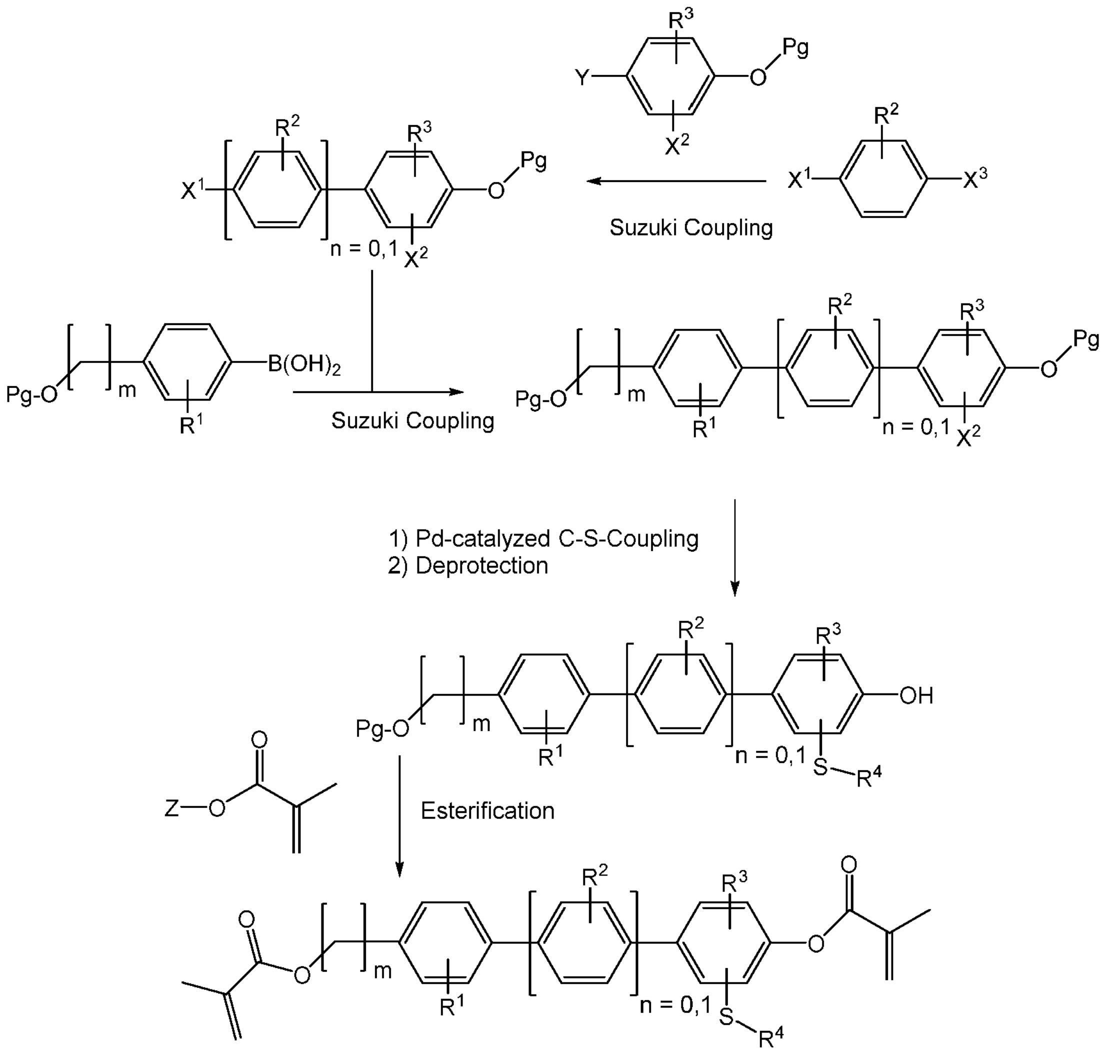


Wherein Z denotes H or -R-OH, Y denotes boronic ester, boronic acid or halogen, $X^{1,2,3}$ denote halogen, preferably Br or Cl, $R^{1,2,3,4}$ denote substituents, Pg denotes protecting groups or H, m is ≥ 0 and m = 0 denotes a single bond.

Compounds of formula I and its subformulae with different substitution pattern or with different mesogenic groups can be prepared in analogy to Scheme 1.

Besides the polymerizable compounds described above, the LC media for use in the LC displays according to the invention comprise an LC mixture ("host mixture") comprising one or more, preferably two or more LC compounds which are selected from low-molecular-weight compounds that are unpolymerizable, and at least one of which is a compound of formula II. These LC compounds are selected such that they stable and/or unreactive to a polymerization reaction under the conditions applied to the polymerization of the polymerizable compounds.

Particularly preferred embodiments of such an LC medium are shown below.

Preferably the LC medium contains one or more compounds of formula II selected from the group consisting of compounds of the formulae IIA, IIB, IIC and IID

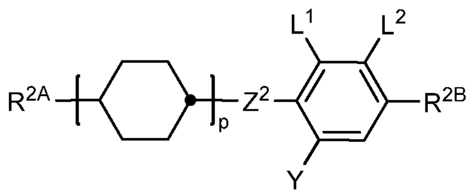

IIA

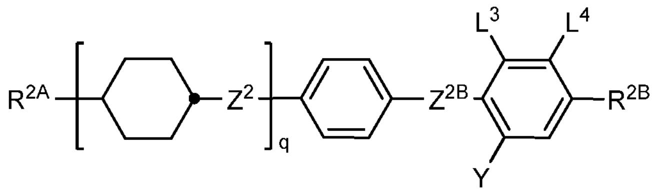

IIB

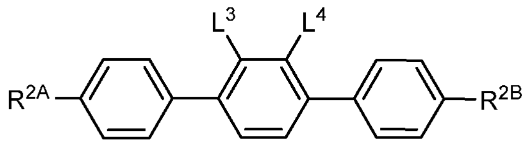

IIC

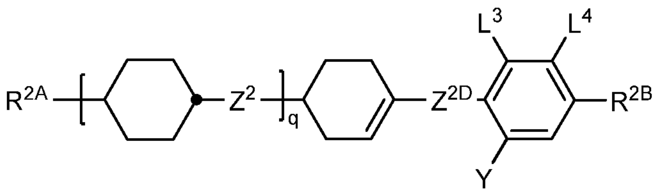

IID

in which

$R^{2A}$ and $R^{2B}$ each, independently of one another, denote H, an alkyl or alkenyl radical having up to 15 C atoms which is unsubstituted, monosubstituted by CN or $CF_3$ or at least monosubstituted by halogen, where, in addition, one or more $CH_2$ groups in these radicals may be replaced by -O-, -S-,

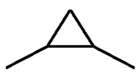, 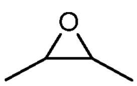, 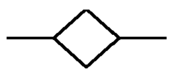, 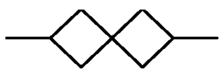,

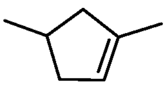, 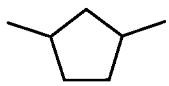,

-C≡C-, $-CF_2O-$, $-OCF_2-$, -OC-O- or -O-CO- in such a way that O atoms are not linked directly to one another,

$L^1$ to $L^4$ each, independently of one another, denote F, Cl, $CF_3$ or $CHF_2$,

Y denotes H, F, Cl, $CF_3$, $CHF_2$ or $CH_3$, preferably H or $CH_3$, particularly preferably H,

$Z^2$, $Z^{2B}$ and $Z^{2D}$ each, independently of one another, denote a single bond, $-CH_2CH_2-$, -CH=CH-, $-CF_2O-$, $-OCF_2-$, $-CH_2O-$, $-OCH_2-$,-COO-, -OCO-, $-C_2F_4-$, -CF=CF-, $-CH=CHCH_2O-$,

p denotes 0, 1 or 2, and

q on each occurrence, identically or differently, denotes 0 or 1.

Preferred compounds of the formulae IIA, IIB, IIC and IID are those wherein $R^{2B}$ denotes an alkyl or alkoxy radical having up to 15 C atoms, and very preferablydenotes $(O)C_vH_{2v+1}$ wherein (O) is an oxygen atom or a single bond and v is 1, 2, 3, 4, 5 or 6.

Further preferred compounds of the formulae IIA, IIB, IIC and IID are those wherein $R^{2A}$ or $R^{2B}$ denotes or contains cycloalkyl or cycloalkoxy radical, preferably selected from the group consisting of

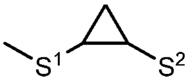 , 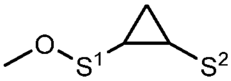 , 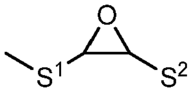 , 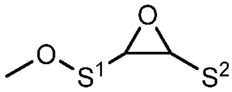 ,

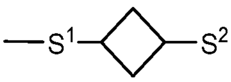 , 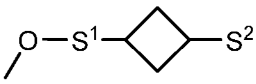 , 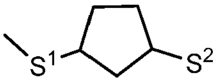 , 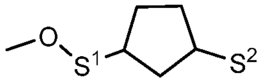 ,

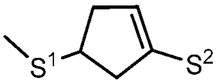 , 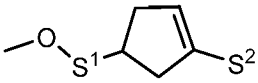 , 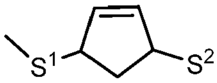 , 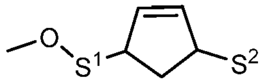 ,

wherein $S^1$ is $C_{1-5}$-alkylene or $C_{2-5}$-alkenylene and $S^2$ is H, $C_{1-7}$-alkyl or $C_{2-7}$-alkenyl, and very preferably are selected from the group consisting of

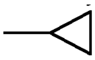 , 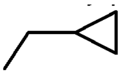 , 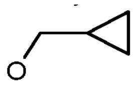 , 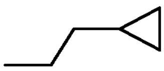 , 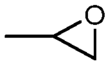 , 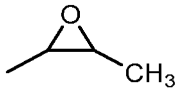 ,

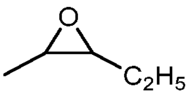 , 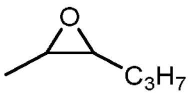 , 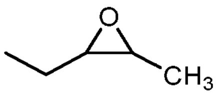 , 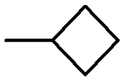 ,

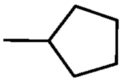 , 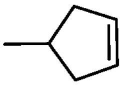 . 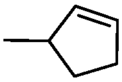 , 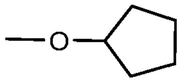 , 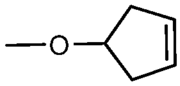

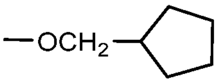 , 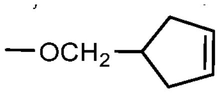 , 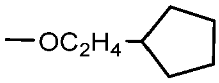 , 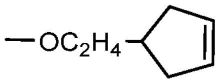 .

In a preferred embodiment the LC medium comprises one or more compounds of the formula IIA selected from the group consisting of formulae IIA-1 to IIA-76,

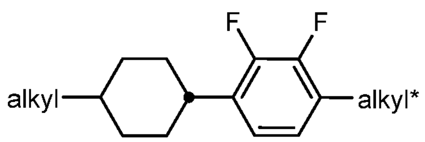

IIA-1

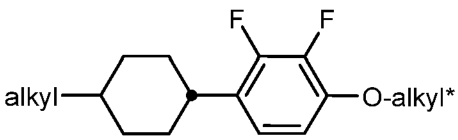

IIA-2

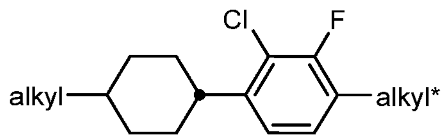

IIA-3

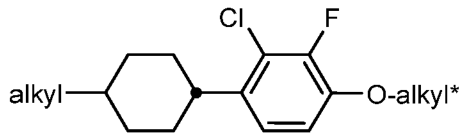

IIA-4

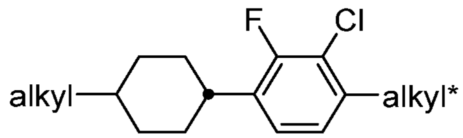

IIA-5

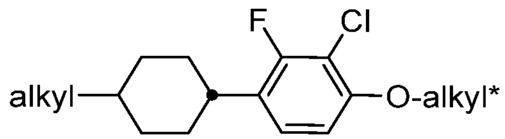

IIA-6

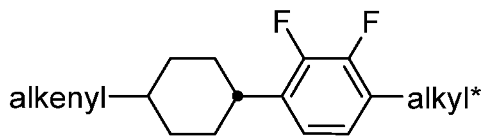

IIA-7

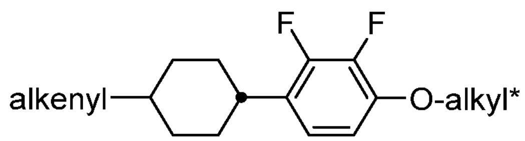

IIA-8

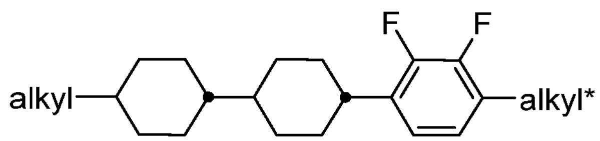

IIA-9

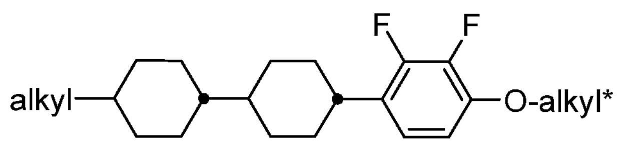

IIA-10

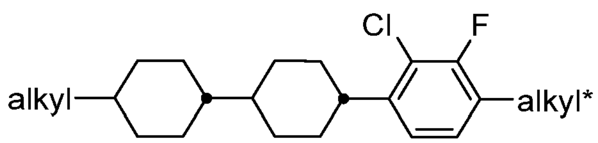

IIA-11

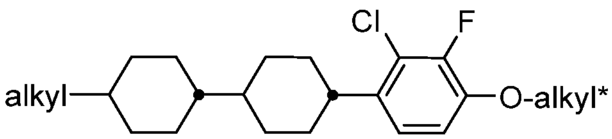

IIA-12

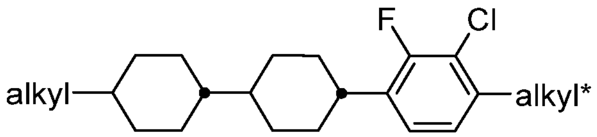

IIA-13

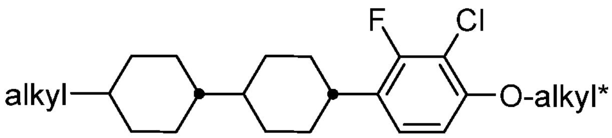

IIA-14

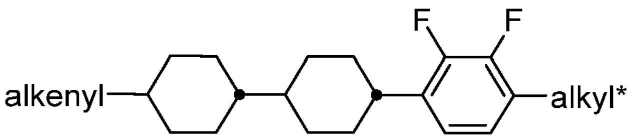

IIA-15

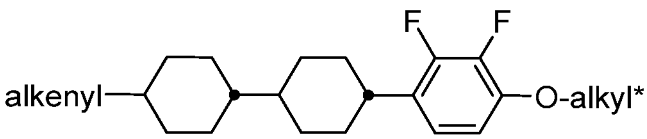

IIA-16

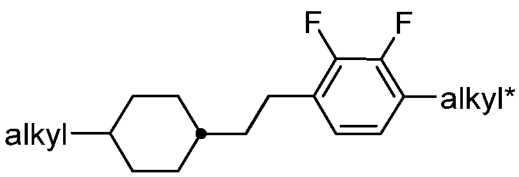

IIA-17

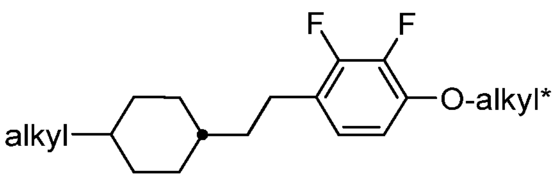

IIA-18

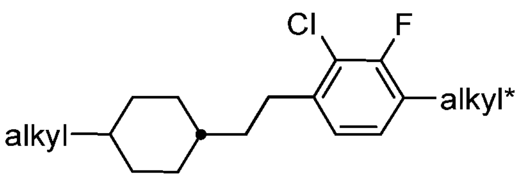

IIA-19

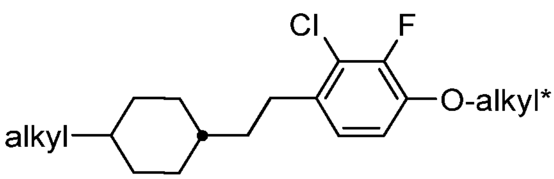

IIA-20

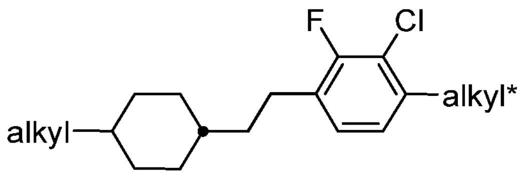

IIA-21

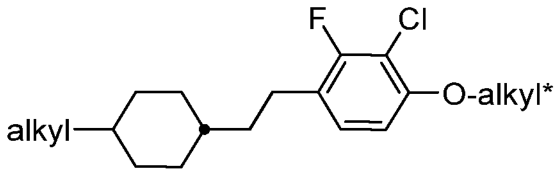

IIA-22

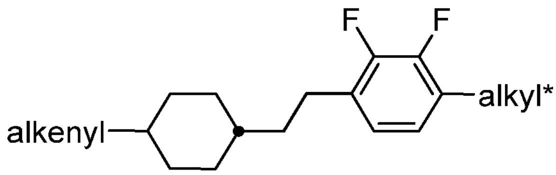

IIA-23

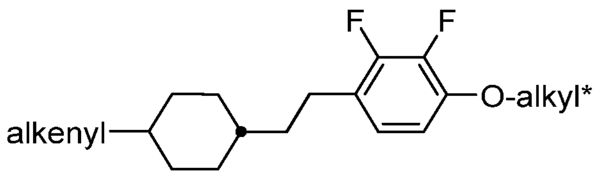

IIA-24

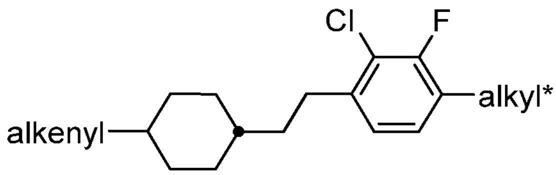

IIA-25

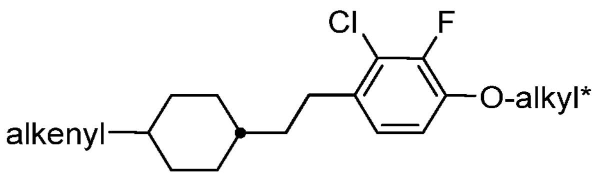

IIA-26

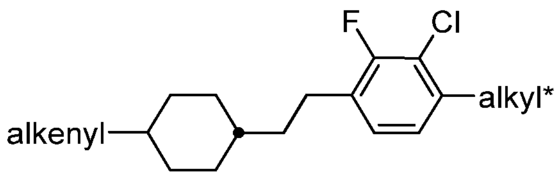

IIA-27

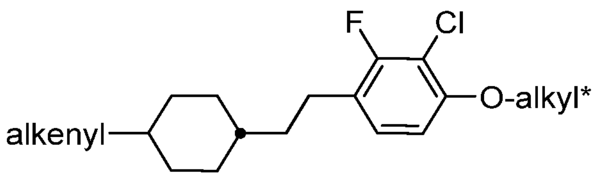

IIA-28

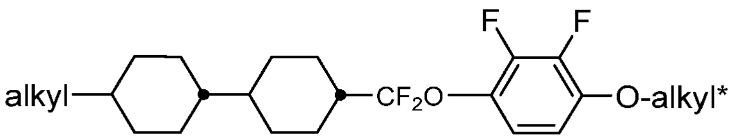

IIA-29

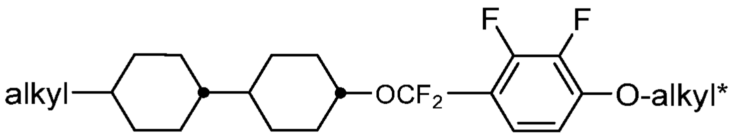

IIA-30

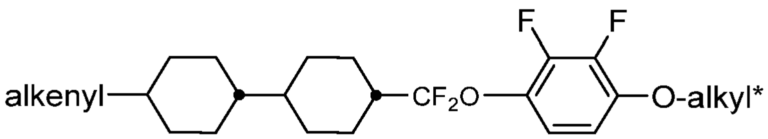

IIA-31

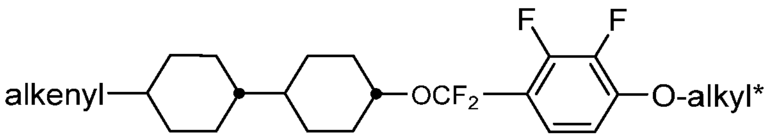

IIA-32

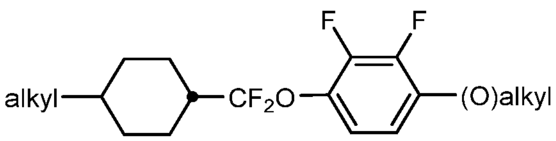

IIA-33

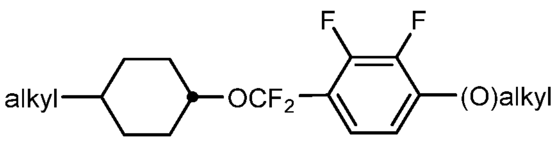

IIA-34

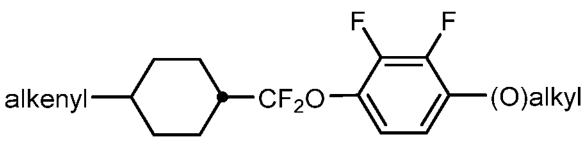

IIA-35

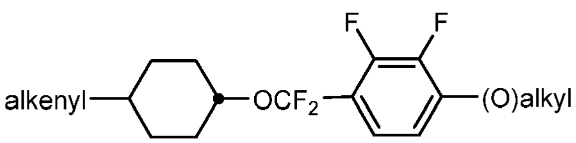

IIA-36

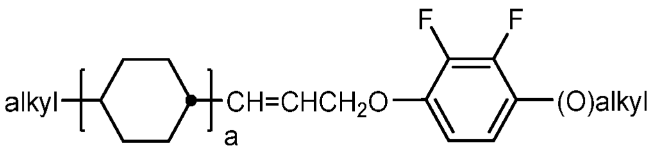

IIA-37

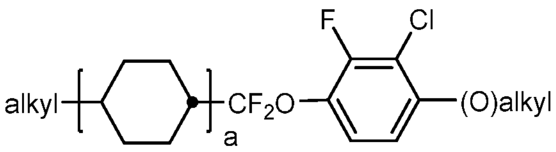

IIA-38

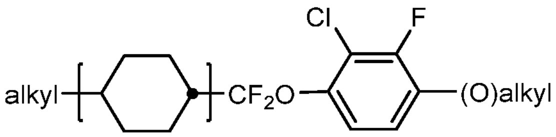

IIA-39

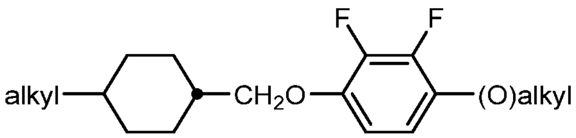

IIA-40

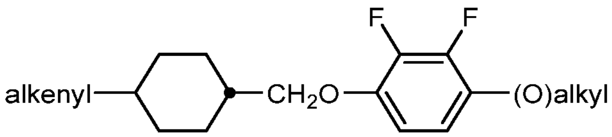

IIA-41

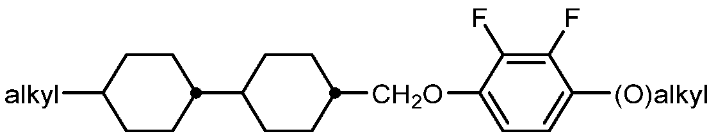

IIA-42

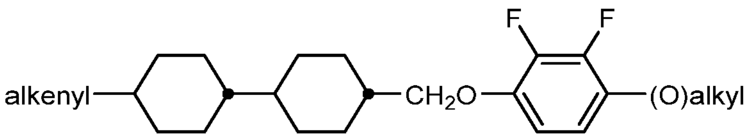

IIA-43

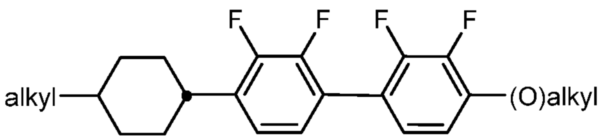

IIA-44

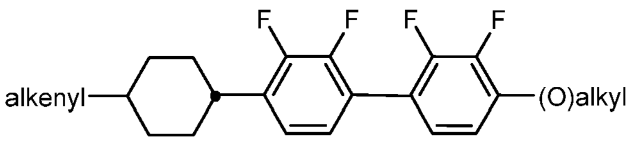

IIA-45

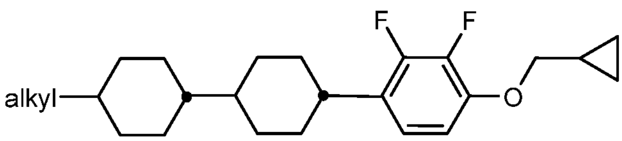

IIA-46

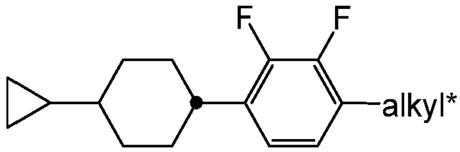

IIA-47

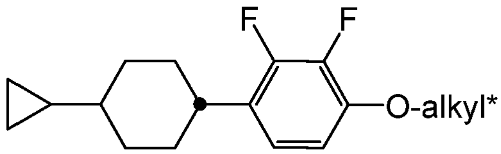

IIA-48

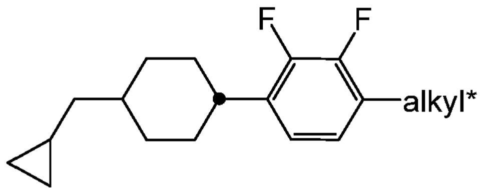

IIA-49

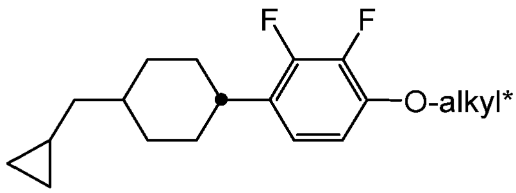

IIA-50

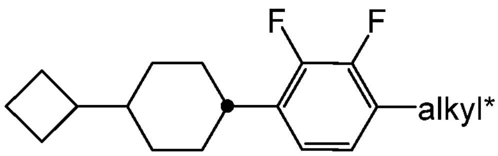

IIA-51

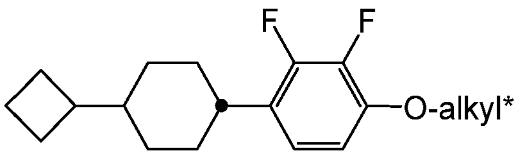

IIA-52

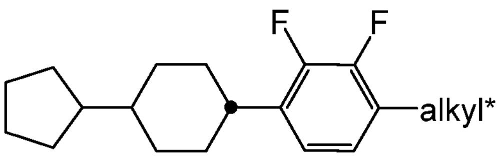

IIA-53

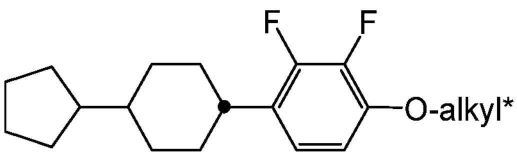

IIA-54

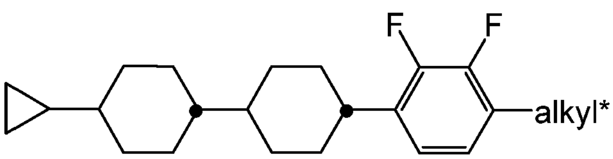

IIA-55

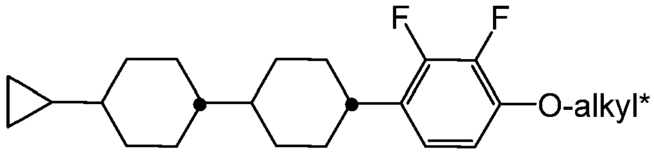

IIA-56

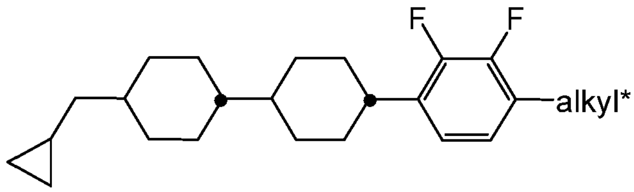

IIA-57

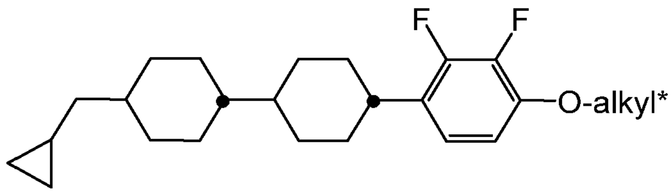

IIA-58

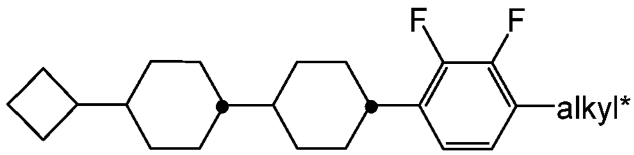

IIA-59

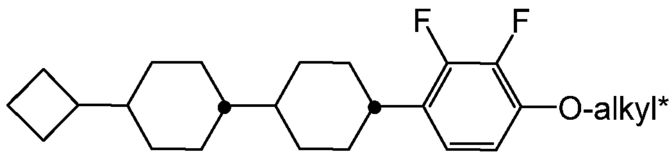

IIA-60

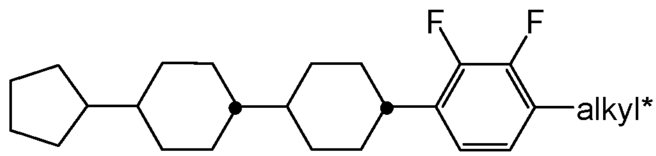

IIA-61

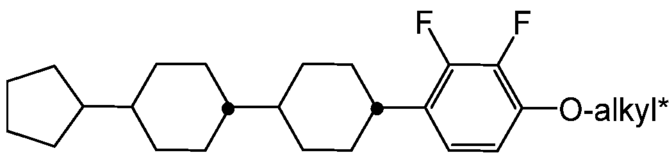

IIA-62

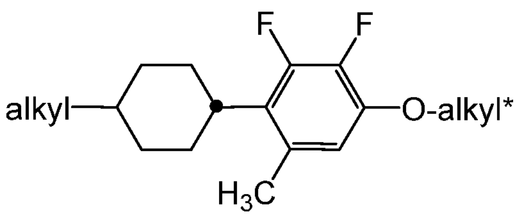

IIA-63

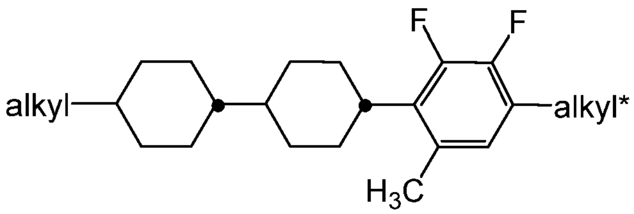

IIA-64

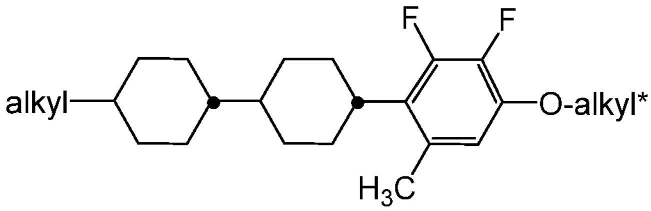

IIA-65

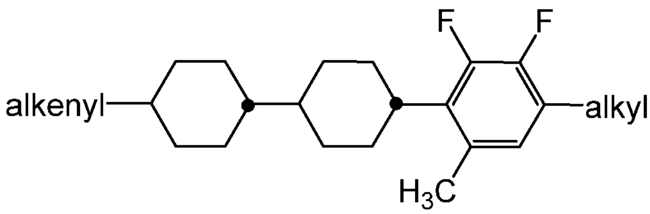

IIA-66

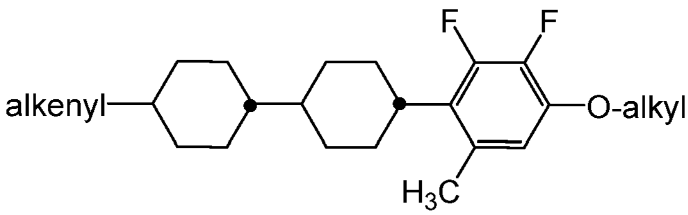

IIA-67

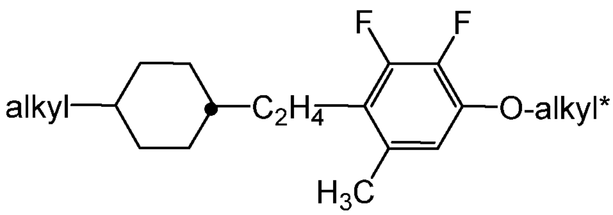

IIA-68

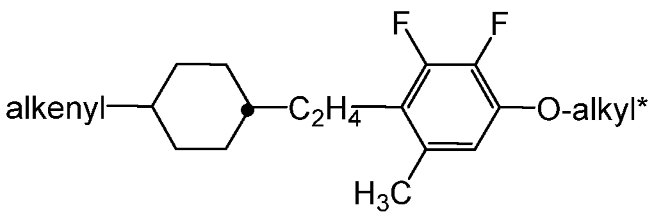

IIA-69

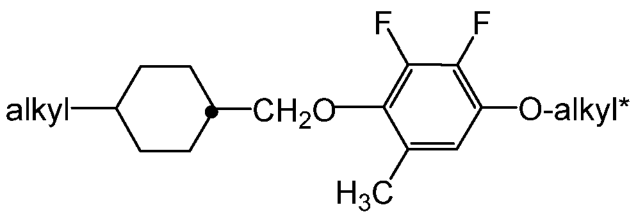

IIA-70

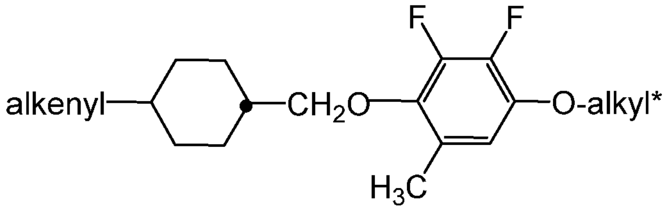

IIA-71

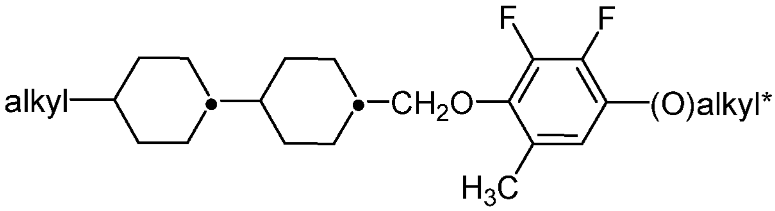

IIA-72

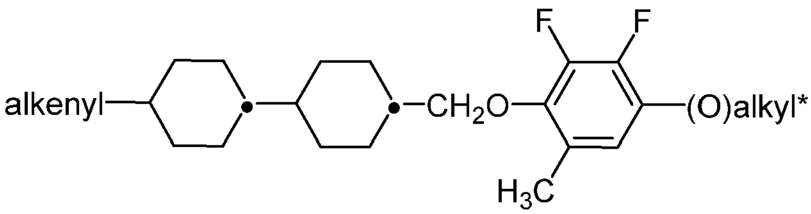

IIA-73

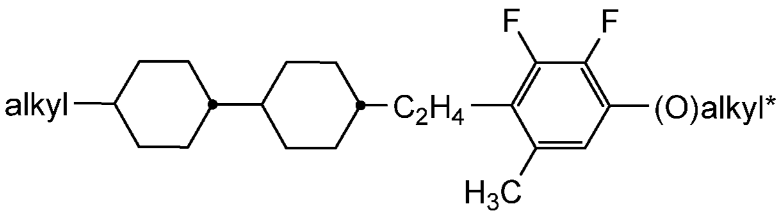

IIA-74

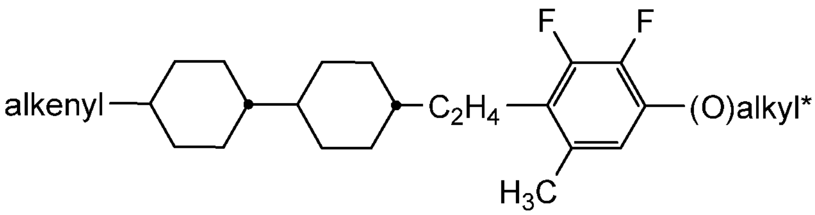

IIA-75

in which the index a denotes 1 or 2, "alkyl" and "alkyl*" each, independently of one another, denote a straight-chain alkyl radical having 1-6 C atoms, "alkenyl" denotes a straight-chain alkenyl radical having 2-6 C atoms, and (O) denotes an oxygen atom or a single bond. "alkenyl" preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-(CH2)2-.

Particularly preferred LC media according to the invention comprise one or more compounds selected from the group consisting of formulae IIA-2, IIA-8, IIA-10, IIA-16, II-18, IIA-40, IIA-41, IIA-42 and IIA-43.

In another preferred embodiment the LC medium comprises one or more compounds of the formula IIB selected from the group consisting of formulae IIB-1 to IIB-26,

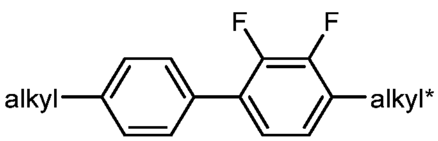

IIB-1

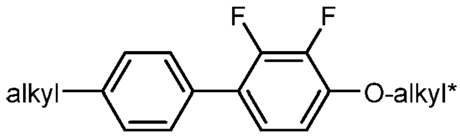

IIB-2

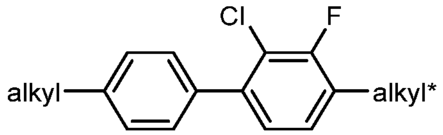

IIB-3

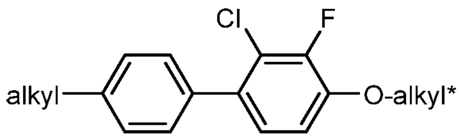

IIB-4

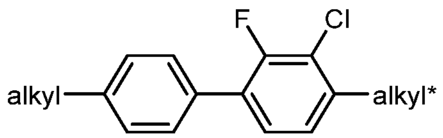

IIB-5

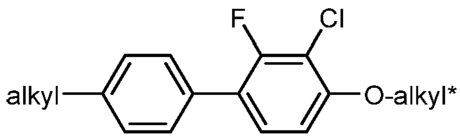

IIB-6

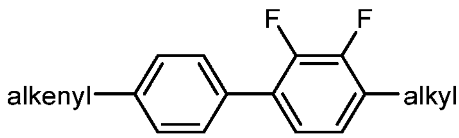

IIB-7

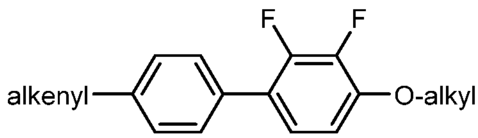

IIB-8

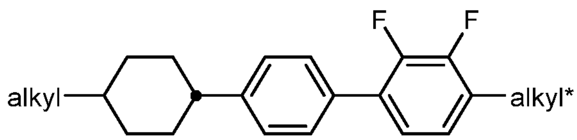

IIB-9

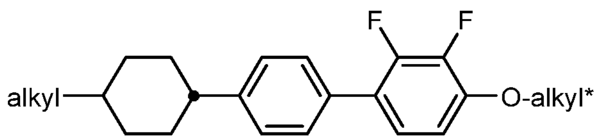

IIB-10

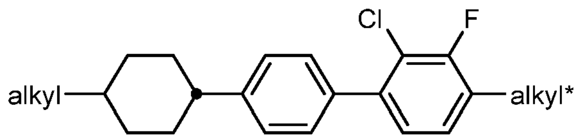

IIB-11

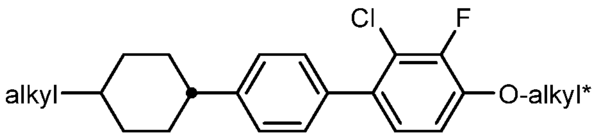

IIB-12

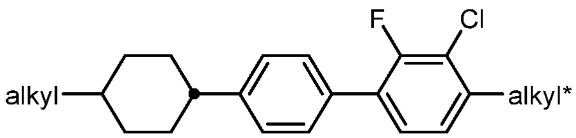

IIB-13

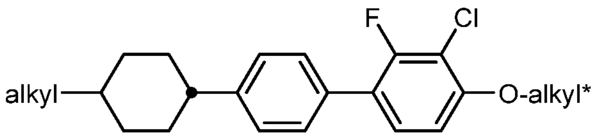

IIB-14

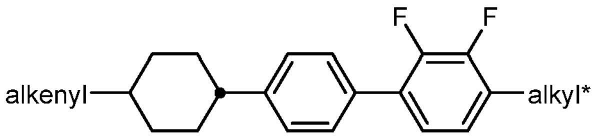

IIB-15

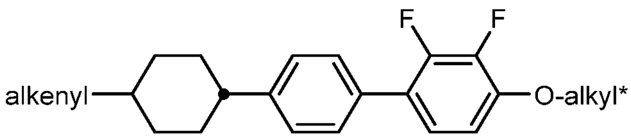

IIB-16

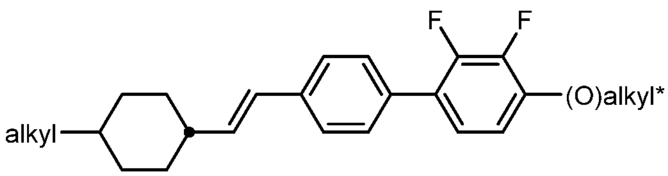

IIB-17

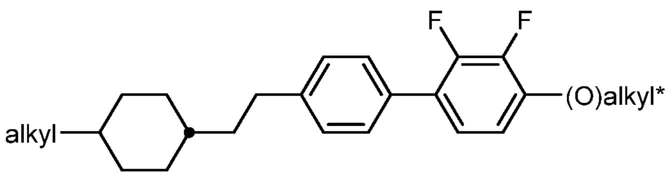

IIB-18

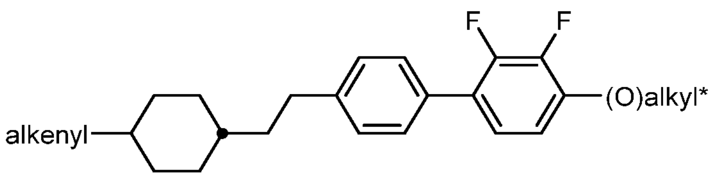

IIB-19

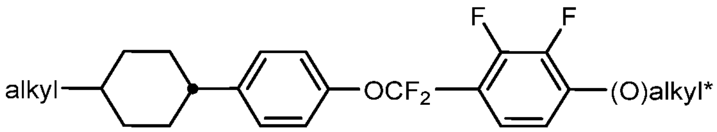

IIB-20

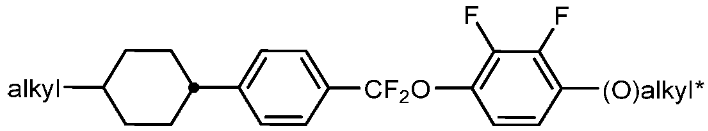

IIB-21

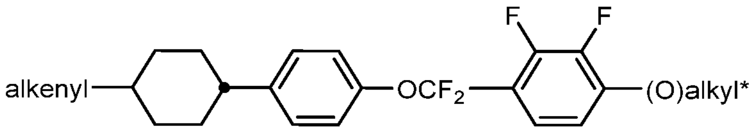

IIB-22

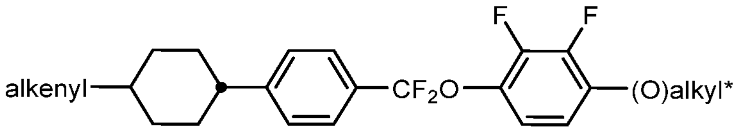

IIB-23

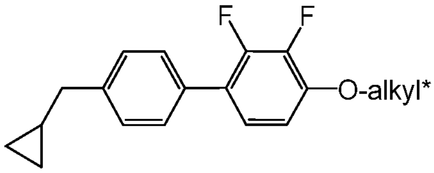

IIB-24

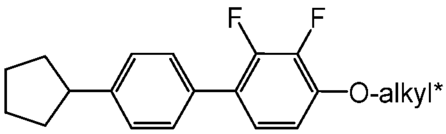

IIB-25

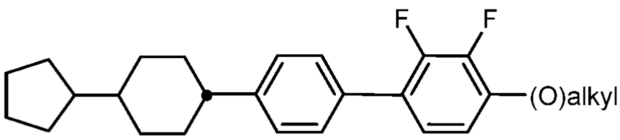

IIB-26

in which "alkyl", "alkyl*", "alkenyl" and (O) have the meanings given above.

Particularly preferred LC media according to the invention comprise one or more compounds selected from the group consisting of formulae IIB-2, IIB-10 and IIB-16.

In another preferred embodiment the LC medium comprises one or more compounds of the formula IIC selected from the formula IIC-1,

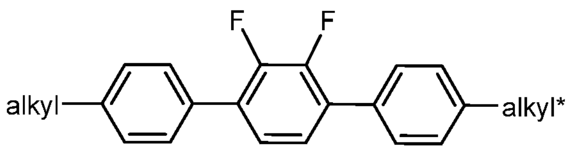

IIC-1

in which "alkyl" and "alkyl*" and (O) have the meanings given above.

In another preferred embodiment the LC medium comprises one or more compounds of the formula IID selected from the group consisting of formulae IID-1 to IID-10,

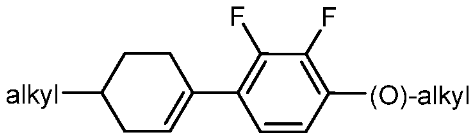

IID-1

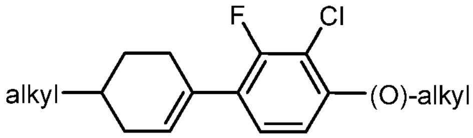

IID-2

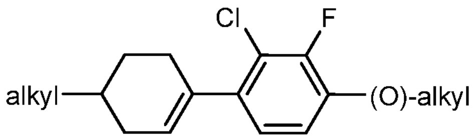

IID-3

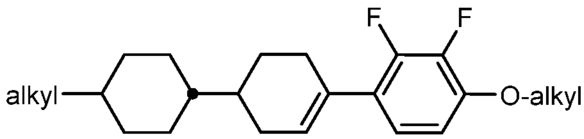

IID-4

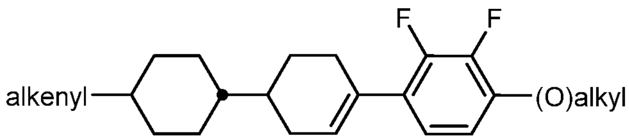

IID-5

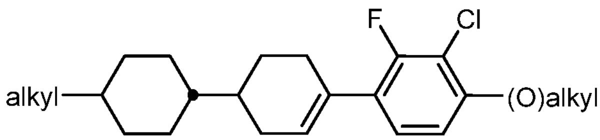

IID-6

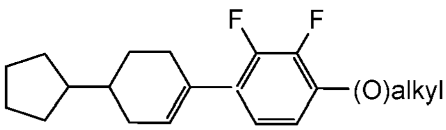

IID-7

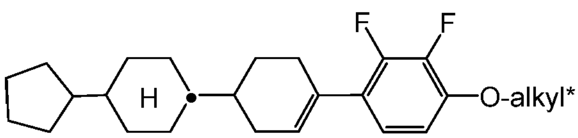

IID-8

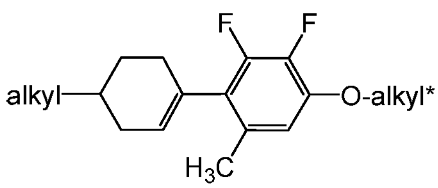

IID-9

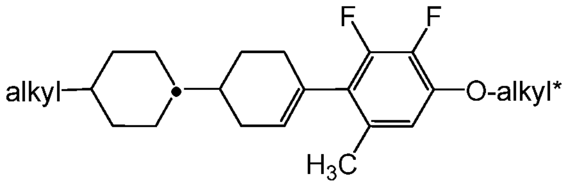

IID-10

in which "alkyl", "alkyl*", "alkenyl" and (O) have the meanings given above.

Particularly preferred LC media according to the invention comprise one or more compounds of the formula IID-4.

The proportion of compounds of the formulae IIA and/or IIB in the mixture as a whole is preferably at least 20 % by weight.

In another preferred embodiment the LC medium comprises one or more compounds of formula III

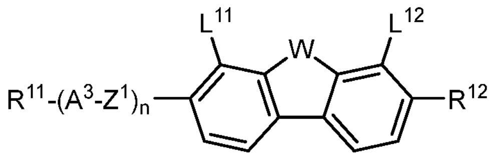

III

in which

$R^{11}$ and $R^{12}$ each, independently of one another, denote H, an alkyl or alkoxy radical having 1 to 15 C atoms, where one or more $CH_2$ groups in these radicals may each be replaced, independently of one another, by

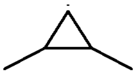 , 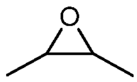 , 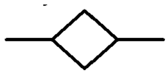 , 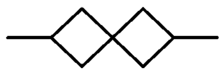 ,

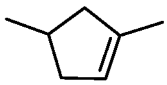 , 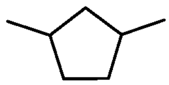 ,

-O-, -S-, -C≡C-, $-CF_2O-$, $-OCF_2-$, -CH=CH-, -OC-O-or -O-CO- in such a way that O atoms are not linked directly to one another, and in which, in addition, one or more H atoms may be replaced by halogen,

$A^3$ on each occurrence, independently of one another, denotes

a) 1,4-cyclohexenylene or 1,4-cyclohexylene radical, in which one or two non-adjacent $CH_2$ groups may be replaced by -O- or -S-,

b) a 1,4-phenylene radical, in which one or two CH groups may be replaced by N, or

c) a radical selected from the group consisting of spiro[3.3]heptane-2,6-diyl, 1,4-bicyclo[2.2.2]octylene, naphthalene-2,6-diyl, decahydronaphthalene-2,6-diyl, 1,2,3,4-tetrahydronaphthalene-2,6-diyl, phenanthrene-2,7-diyl and fluorene-2,7-diyl,

wherein the radicals a), b) and c) may be mono- or polysubstituted by halogen atoms,

n denotes 0, 1 or 2, preferably 0 or 1,

$Z^1$ on each occurrence independently of one another denotes-CO-O-, -O-CO-, $-CF_2O-$ , $-OCF_2-$, $-CH_2O-$, $-OCH_2-$, $-CH_2-$,$-CH_2CH_2-$, $-(CH_2)_4-$, $-CH=CH-CH_2O-$, $-C_2F_4-$, $-CH_2CF_2-$,$-CF_2CH_2-$, -CF=CF-, -CH=CF-, -CF=CH-, -CH=CH-, -C□C- or a single bond, and

$L^{11}$ and $L^{12}$ each, independently of one another, denote F, Cl, $CF_3$ or $CHF_2$, preferably H or F, most preferably F, and

W denotes O or S.

In a preferred embodiment of the present invention the LC medium comprises one or more compounds of the formula III-1 and/or III-2

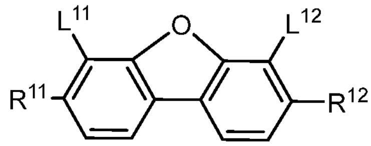

III-1

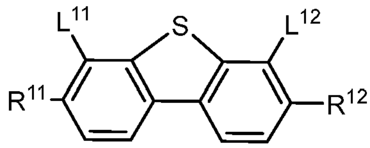

III-2

in which the occurring groups have the same meanings as given under formula III above and preferably

| | |
|---|---|
| $R^{11}$ and $R^{12}$ | each, independently of one another, an alkyl, alkenyl or alkoxy radical having up to 15 C atoms, more preferably one or both of them denote an alkoxy radical and |
| $L^{11}$ and $L^{12}$ | each preferably denote F. |

In another preferred embodiment the LC medium comprises one or more compounds of the formula III-1 selected from the group consisting of formulae III-1-1 to III-1-10, preferably of formula III-1-6,

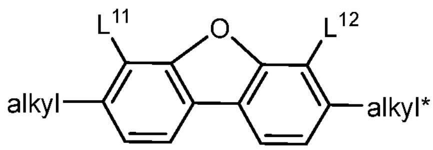

III-1-1

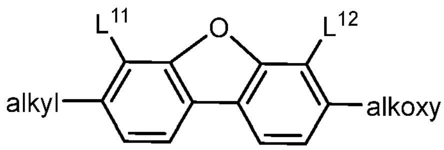

III-1-2

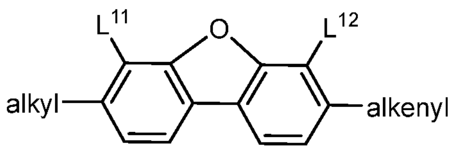

III-1-3

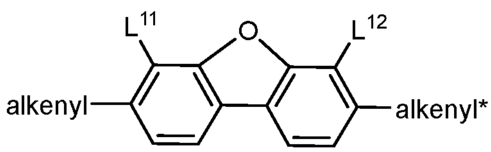

III-1-4

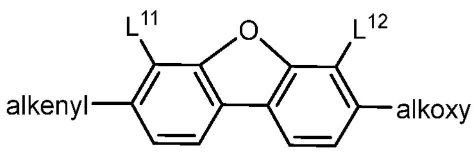

III-1-5

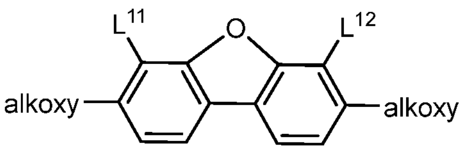

III-1-6

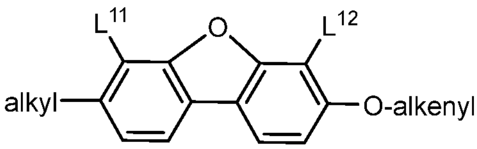

III-1-7

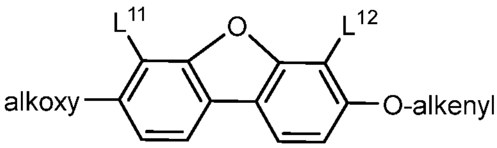

III-1-8

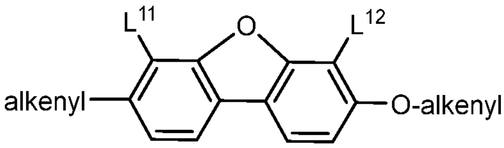

III-1-9

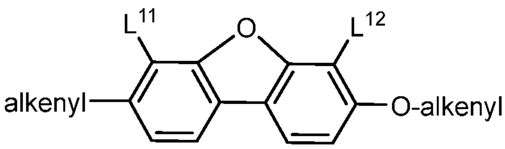

III-1-10,

in which "alkyl" and "alkyl*" each, independently of one another, denote a straight-chain alkyl radical having 1-6 C atoms, "alkenyl" and "alkenyl*" each, independently of one another, denote a straight-chain alkenyl radical having 2-6 C atoms, "alkoxy" and "alkoxy*" each, independently of one another, denote a straight-chain alkoxy radical having 1-6 C atoms, and $L^{11}$ and $L^{12}$ each, independently of one another, denote F or Cl, preferably both F.

In another preferred embodiment the LC medium comprises one or more compounds of the formula III-2 selected from the group consisting of formulae III-2-1 to III-2-10, preferably of formula III-2-6,

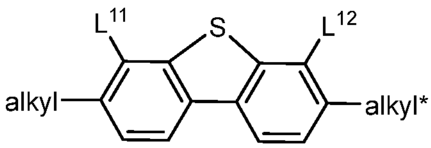

III-2-1

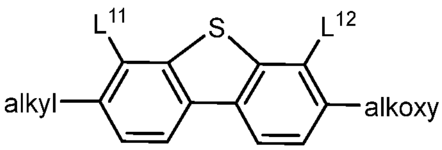

III-2-2

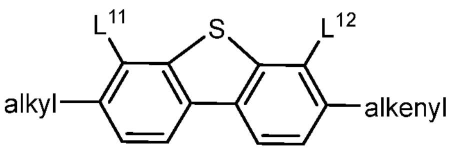

III-2-3

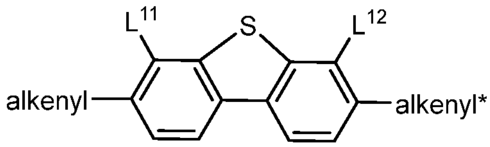

III-2-4

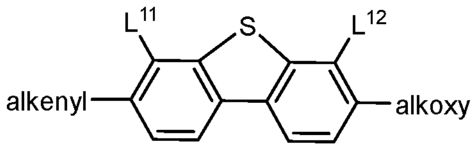

III-2-5

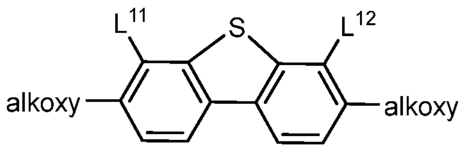

III-2-6

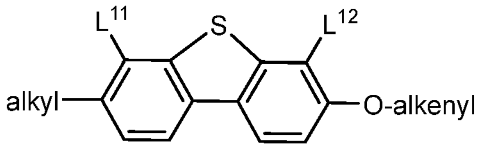

III-2-7

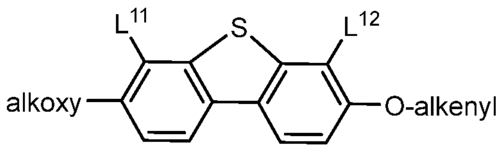

III-2-8

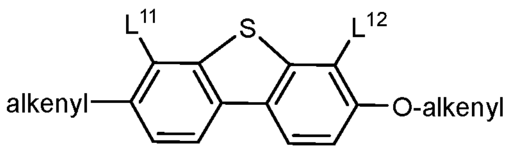

III-2-9

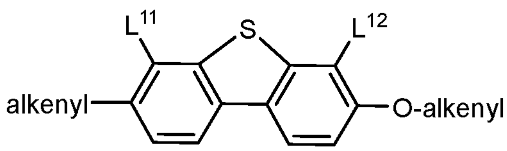

III-2-10,

in which "alkyl" and "alkyl*" each, independently of one another, denote a straight-chain alkyl radical having 1-6 C atoms, "alkenyl" and "alkenyl*" each, independently of one another, denote a straight-chain alkenyl radical having 2-6 C atoms, "alkoxy" and "alkoxy*" each, independently of one another, denote a straight-chain alkoxy radical having 1-6 C atoms, and $L^{11}$ and $L^{12}$ each, independently of one another, denote F or Cl, preferably both F.

In a very preferred embodiment the LC medium comprises one or more compounds selected from the group consisting of the following formulae

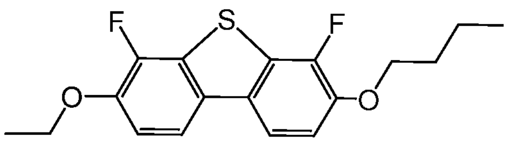

III-2-2-1

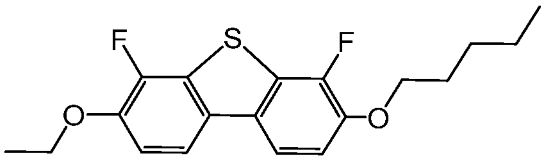

III-2-2-2

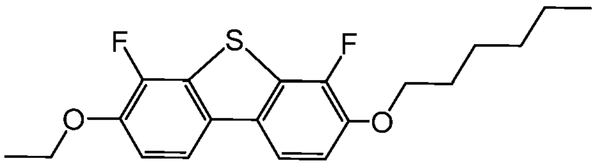

III-2-2-3

In another preferred embodiment of the present invention the LC medium comprises one or more compounds of the formula IIIA-1 and/or IIIA-2

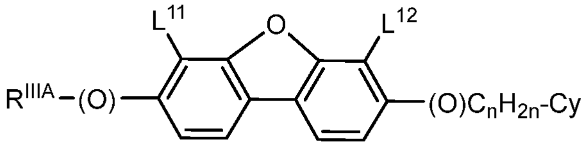

IIIA-1

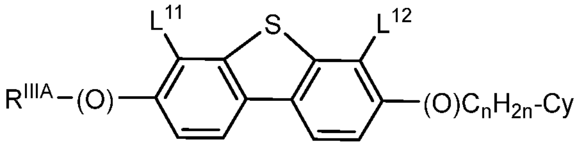

IIIA-2

in which $L^{11}$ and $L^{12}$ have the same meanings as given under formula III, (O) denotes O or a single bond,

| | |
|---|---|
| $R^{IIIA}$ | denotes alkyl or alkenyl having up to 7 C atoms or a group Cy-$C_mH_{2m+1}$-, |
| m and n | are, identically or differently, 0, 1, 2, 3, 4, 5 or 6, preferably 1, 2 or 3, very preferably 1, and |
| Cy | denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl or cyclopentyl. |

The compounds of formula IIIA-1 and/or IIIA-2 are contained in the LC medium either alternatively or additionally to the compounds of formula III, preferably additionally.

Very preferred compounds of the formulae IIIA-1 and IIIA-2 are the following:

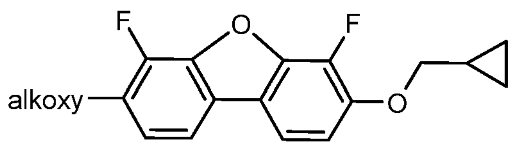

IIIA-1-1

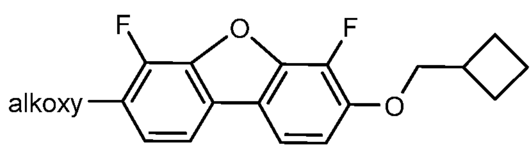

IIIA-1-2

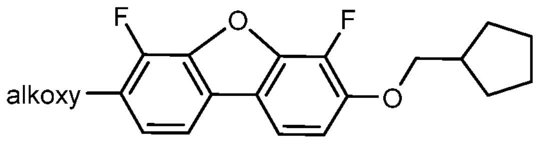

IIIA-1-3

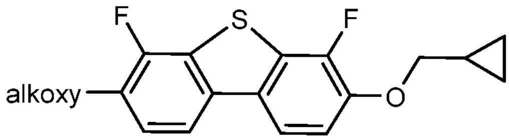

IIIA-2-1

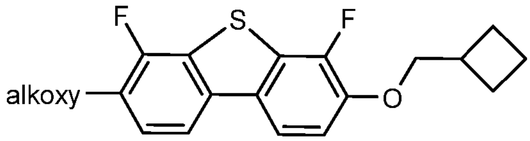

IIIA-2-2

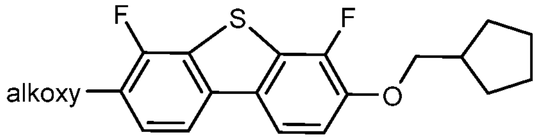

IIIA-2-3

in which "alkoxy" denotes a straight-chain alkoxy radical having 1-6 C atoms, and preferably denotes n-propoxy, n-butyloxy, n-pentyloxy or n-hexyloxy.

In a preferred embodiment of the present invention, the LC medium comprises one or more compounds of formula III-3

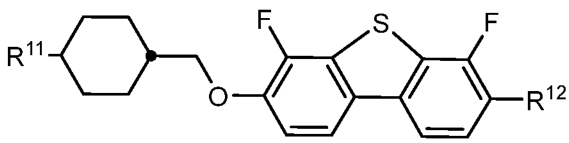

III-3

in which

$R^{11}$, $R^{12}$ identically or differently, denote H, an alkyl or alkoxy radical having 1 to 15 C atoms, in which one or more $CH_2$ groups in these radicals are optionally replaced, independently of one another, by -C=C-, $-CF_2O-$, $-OCF_2-$, -CH=CH-,

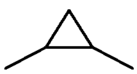, 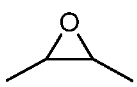, 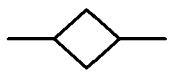, 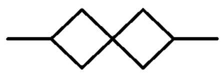,

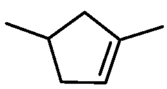, 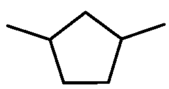,

-O-, -S-, -CO-O- or -O-CO- in such a way that O atoms are not linked directly to one another, and in which, in addition, one or more H atoms may be replaced by halogen.

The compounds of formula III-3 are preferably selected from the group consisting of formulae III-3-1 to III-3-11:

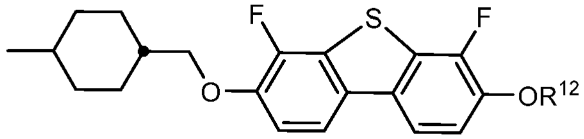

III-3-1

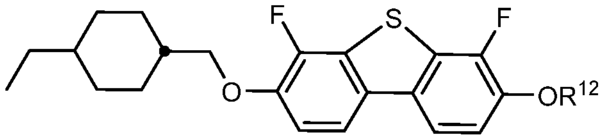

III-3-2

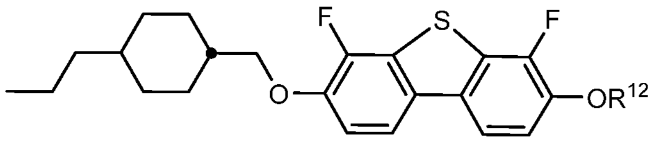

III-3-3

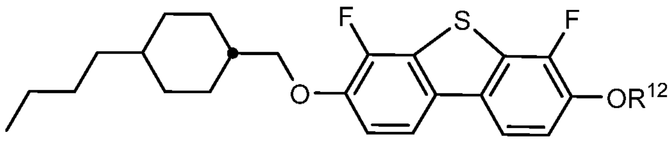

III-3-4

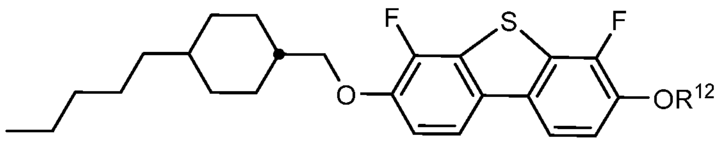

III-3-5

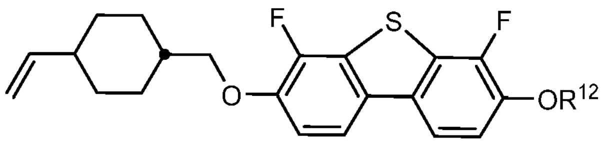

III-3-6

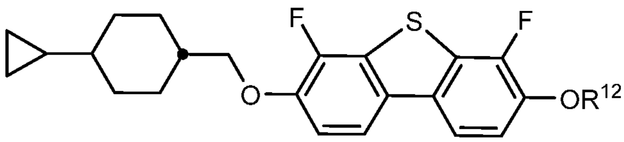

III-3-7

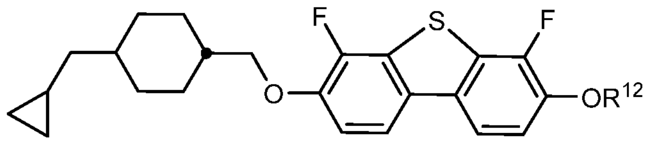

III-3-8

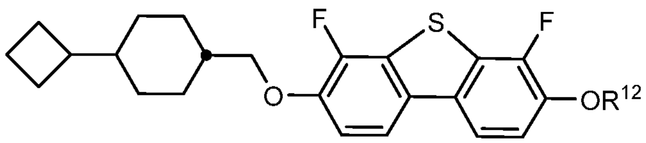

III-3-9

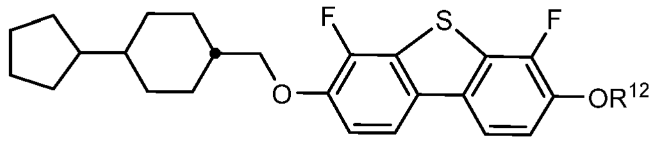

III-3-10

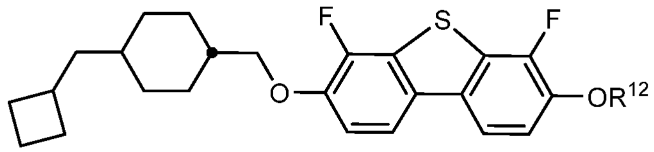

III-3-11

in which $R^{12}$ denotes alkyl having 1 to 7 C-atoms, preferably ethyl, n-propyl, n-butyl, n-pentyl or n-hexyl, or alternatively cyclopropylmethyl, cyclobutylmethyl or cyclopentylmethyl.

In another preferred embodiment of the present invention, the LC medium comprises one or more compounds of the formulae III-4 to III-6, preferably of formula III-5,

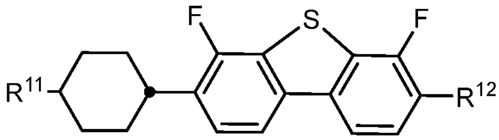

III-4

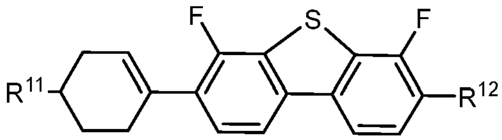

III-5

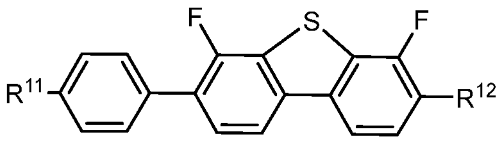

III-6

in which the parameters have the meanings given above, $R^{11}$ preferably denotes straight-chain alkyl and $R^{12}$ preferably denotes alkoxy, each having 1 to 7 C atoms.

In another preferred embodiment the LC medium comprises one or more compounds of the formula I selected from the group consisting of formulae III-7 to III-9, preferably of formula III-8,

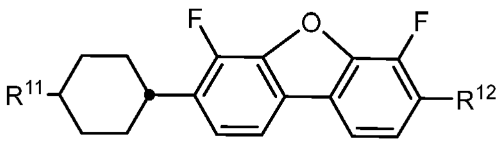

III-7

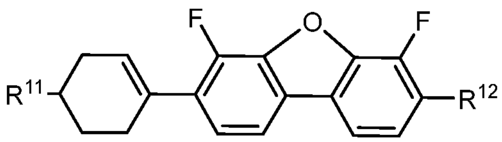

III-8

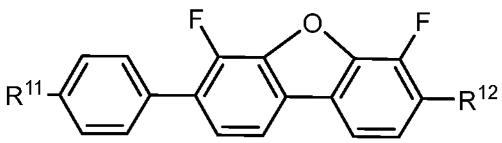

III-9

in which the parameters have the meanings given above, $R^{11}$ preferably denotes straight-chain alkyl and $R^{12}$ preferably denotes alkoxy each having 1 to 7 C atoms.

In a preferred embodiment, the medium comprises one or more compounds of the formula IV,

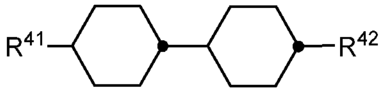

IV

in which

$R^{41}$ denotes an unsubstituted straight-chain, branched or cyclic alkyl radical having 1 to 7 C atoms or an unsubstituted alkenyl radical having 2 to 7 C atoms, preferably an *n*-alkyl radical, particularly preferably having 2, 3, 4 or 5 C atoms, and

$R^{42}$ denotes an unsubstituted straight-chain, branched or cyclic alkyl radical having 1 to 7 C atoms or an unsubstituted alkoxy radical having 1 to 6 C atoms, both preferably having 2 to 5 C atoms, an unsubstituted alkenyl radical having 2 to 7 C atoms, preferably having 2, 3 or 4 C atoms, more preferably a vinyl radical or a 1-propenyl radical and in particular a vinyl radical.

The compounds of the formula IV are preferably selected from the group consisting of formulae IV-1 to IV-6,

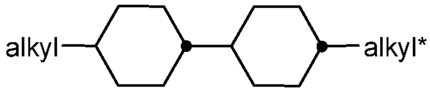

IV-1

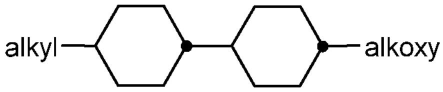

IV-2

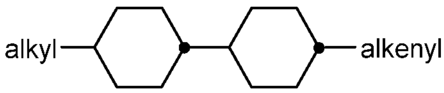

IV-3

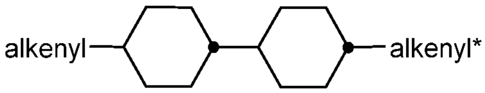

IV-4

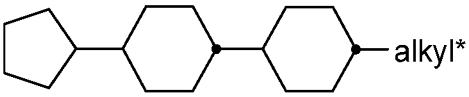

IV-5

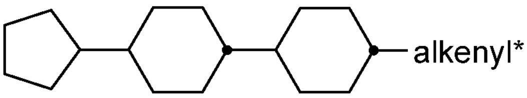

IV-6

in which

| | |
|---|---|
| "alkyl" and "alkyl*" | independently of one another, denote alkyl having 1 to 7 C atoms, preferably having 2 to 5 C atoms, |
| "alkenyl" | denotes an alkenyl radical having 2 to 5 C atoms, preferably having 2 to 4 C atoms, particularly preferably 2 C atoms, |
| "alkenyl*" | denotes an alkenyl radical having 2 to 5 C atoms, preferably having 2 to 4 C atoms, particularly preferably having 2 to 3 C atoms, and |
| "alkoxy" | denotes alkoxy having 1 to 5 C atoms, preferably having 2 to 4 C atoms. |

Preferably, the LC medium comprises one or more compounds selected from the group consisting of formulae IV-1-1 to IV-1-9

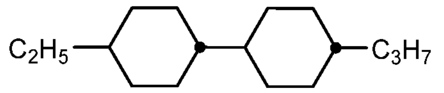

IV-1-1

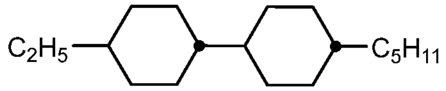

IV-1-2

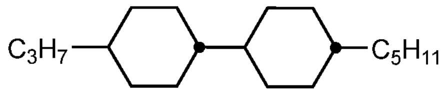

IV-1-3

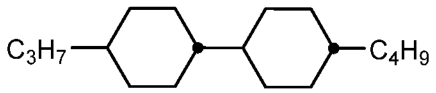

IV-1-4

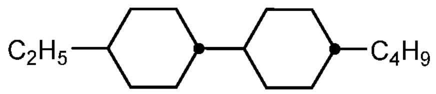

IV-1-5

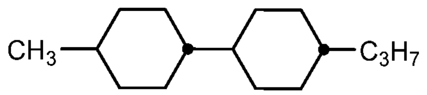

IV-1-6

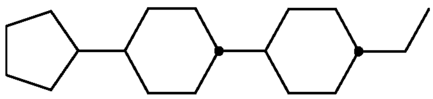

IV-1-7

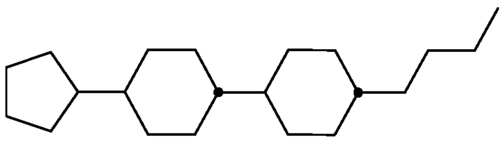

IV-1-8

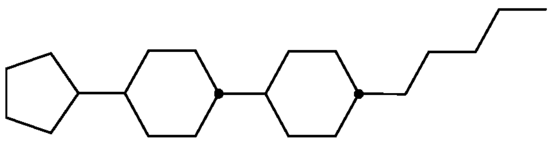

IV-1-9

wherein the propyl, butyl and pentyl groups are straight-chain groups.

Very preferably, the LC medium according to the invention comprises one or more compounds of the formulae IV-2-1 and/or IV-2-2

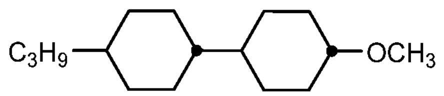

IV-1-1

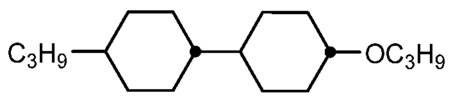

IV-1-2

Very preferably, the LC medium according to the invention comprises a compound of formula IV-3, in particular selected from the group consisting of formulae IV-3-1 to IV-3-6

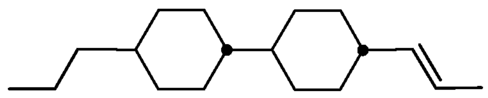

IV-3-1

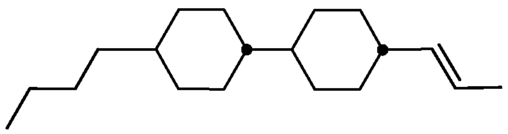

IV-3-2

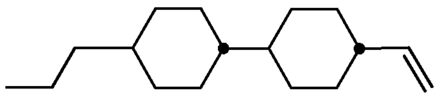

IV-3-3

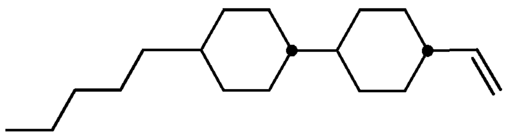

IV-3-4

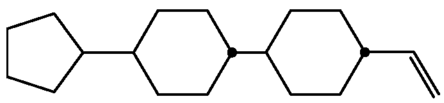

IV-3-5

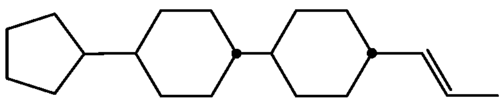

IV-3-6

Very preferably, the LC medium according to the invention comprises a compound of formula IV-4, in particular selected from the formulae IV-4-1 and IV-4-2

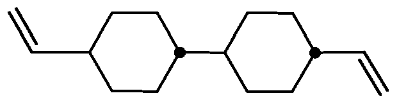

IV-4-1

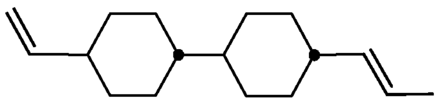

IV-4-2

The LC medium preferably additionally comprises one or more compounds of the formula IVa,

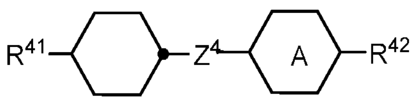

IVa

in which

$R^{41}$ and $R^{42}$ each, independently of one another, denote a straight-chain alkyl, alkoxy, alkenyl, alkoxyalkyl or alkoxy radical having up to 12 C atoms, and

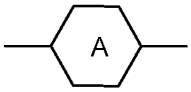 denotes 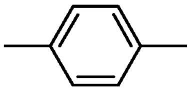, 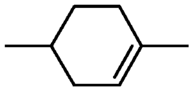, 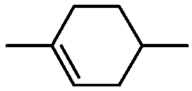,

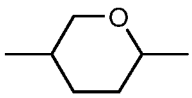 or 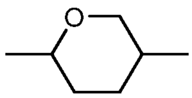,

$Z^4$ denotes a single bond, $-CH_2CH_2-$, -CH=CH-, $-CF_2O-$, $-OCF_2-$, $-CH_2O-$, $-OCH_2-$, -COO-, -OCO-, $-C_2F_4-$, $-C_4H_8-$ or -CF=CF-.

Preferred compounds of the formula IVa are indicated below:

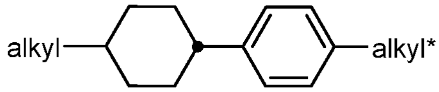 IVa-1

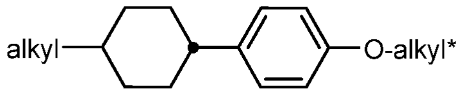 IVa-2

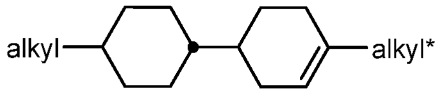 IVa-3

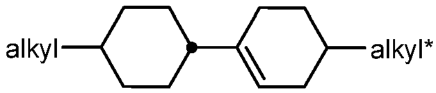 IVa-4

in which alkyl and alkyl* each, independently of one another, denote a straight-chain alkyl radical having 1 to 6 C atoms.

The LC medium according to the invention preferably comprises at least one compound of the formula IVa-1 and/or formula IVa-2.

The proportion of compounds of the formula IVa in the mixture as a whole is preferably at least 5 % by weight

Preferably, the LC medium comprises one or more compounds of formula IVb-1 to IVb-3

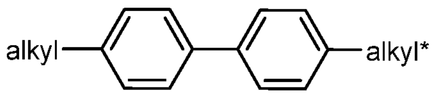 IVb-1

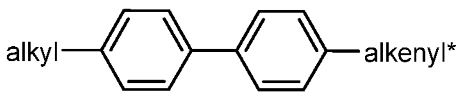 IVb-2

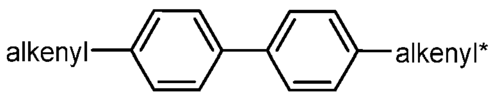 IVb-3

in which

"alkyl" and "alkyl*" each, independently of one another, denote a straight-chain alkyl radical having 1 to 6 C atoms, and

"alkenyl" and "alkenyl*" each, independently of one another, denote a straight-chain alkenyl radical having 2 to 6 C atoms.

The proportion of the biphenyls of the formulae IV-1 to IV-3 in the mixture as a whole is preferably at least 3 % by weight, in particular ≥ 5 % by weight.

Of the compounds of the formulae IVb-1 to IVb-3, the compounds of the formula IVb-2 are particularly preferred.

Particularly preferred biphenyls are

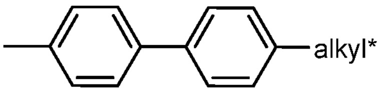

IVb-1-1

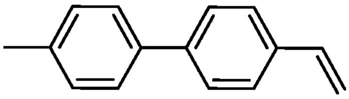

IVb-2-1

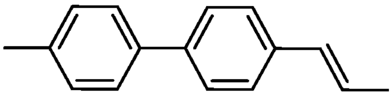

IVb-2-2

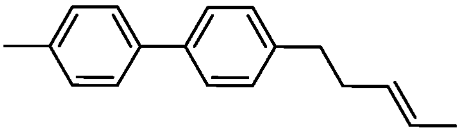

IVb-2-3

in which "alkyl*" denotes an alkyl radical having 1 to 6 C atoms and preferably denotes n-propyl.

The LC medium according to the invention particularly preferably comprises one or more compounds of the formulae IVb-1-1 and/or IVb-2-3.

In a preferred embodiment, the LC medium comprises one or more compounds of formula V

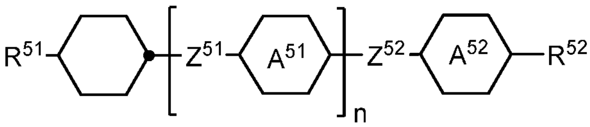

V

in which

$R^{51}$ and $R^{52}$ independently of one another, have one of the meanings given for $R^{41}$ and $R^{42}$ and preferably denote alkyl having 1 to 7 C atoms, preferably n-alkyl, particularly preferably n-alkyl having 1 to 5 C atoms, alkoxy having 1 to 7 C atoms, preferably n-alkoxy, particularly preferably n-alkoxy having 2 to 5 C atoms, alkoxyalkyl, alkenyl or alkenyloxy having 2 to 7 C atoms, preferably having 2 to 4 C atoms, preferably alkenyloxy,

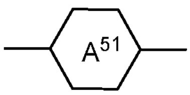 , 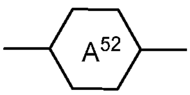 ,

identically or differently, denote

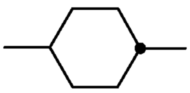 , 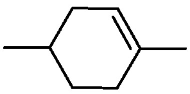 , 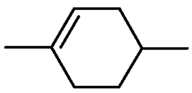 ,

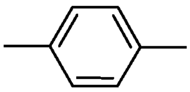, 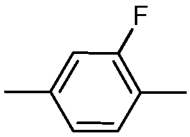, or 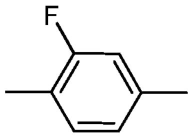

in which

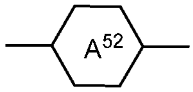

preferably denotes

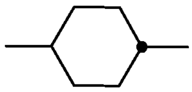 or, 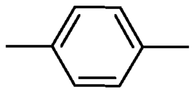,

$Z^{51}$, $Z^{52}$ each, independently of one another, denote $-CH_2-CH_2-$, $-CH_2-O-$,-CH=CH-, -C=C-, -COO- or a single bond, preferably $-CH_2-CH_2-$, $-CH_2-O-$ or a single bond and particularly preferably a single bond, and

n is 1 or 2.

The compounds of formula V are preferably selected from the group consisting of formulae V-1 to V-16:

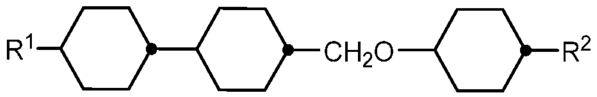

V-1

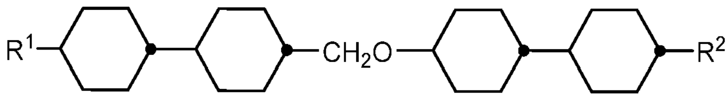

V-2

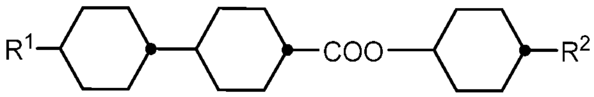

V-3

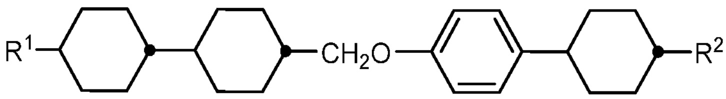

V-4

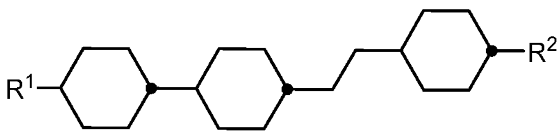

V-5

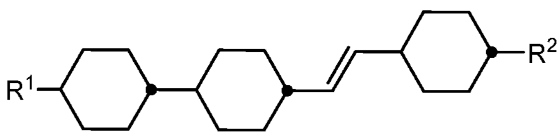

V-6

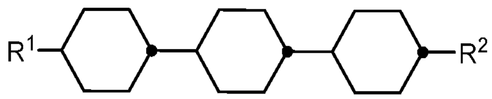

V-7

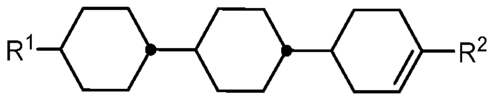

V-8

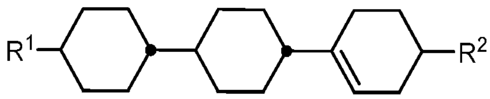

V-9

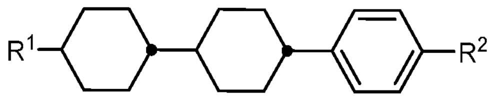

V-10

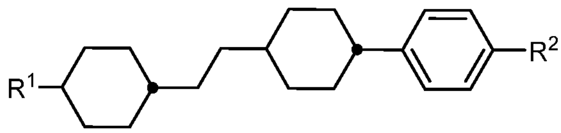

V-11

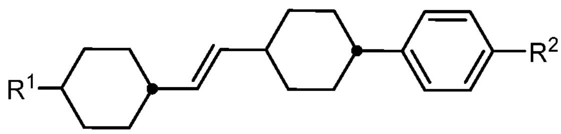

V-12

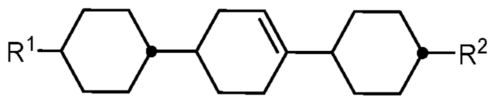

V-13

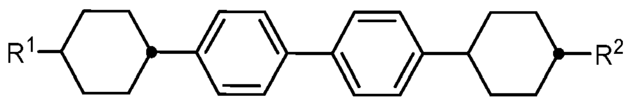

V-14

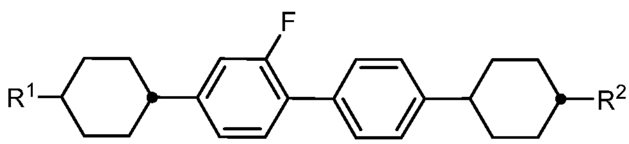

V-15

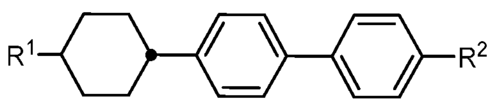

V-16

in which $R^1$ and $R^2$ have the meanings indicated for $R^{2A}$ above.

$R^1$ and $R^2$ preferably each, independently of one another, denote straight-chain alkyl or alkenyl.

Preferred LC media comprise one or more compounds of the formulae V-1, V-3, V-4, V-6, V-7, V-10, V-11, V-12, V-14, V-15, and/or V-16

LC media according to the invention very particularly preferably comprise the compounds of the formula V-10,

V-12, V-16 and/or IV-1, in particular in amounts of 5 to 30 %.

Preferred compounds of the formulae V-10 are indicated below:

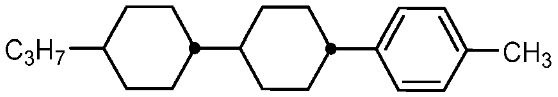
V-10a

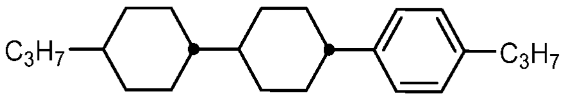
V-10b

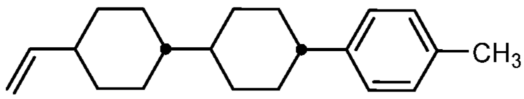
V-10c

The LC medium according to the invention particularly preferably comprises the tricyclic compounds of the formula V-10a and/or of the formula V-10b in combination with one or more bicyclic compounds of the formulae IV-1 The total proportion of the compounds of the formulae V-10a and/or V-10b in combination with one or more compounds selected from the bicyclohexyl compounds of the formula IV-1 is 5 to 40 %, very particularly preferably 15 to 35 %.

Very particularly preferred LC media comprise compounds V-10a and CC-2-3

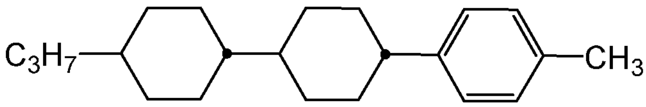
V-10a

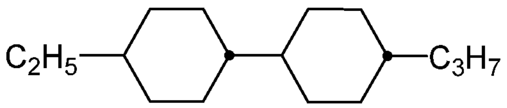
IV-1-1

The compounds V-10a and IV-1-1 are preferably present in the mixture in a concentration of 15 to 35 %, particularly preferably 15 to 25 % and especially preferably 18 to 22 %, based on the mixture as a whole.

Very particularly preferred LC media comprise the compounds V-10b and IV-1-1:

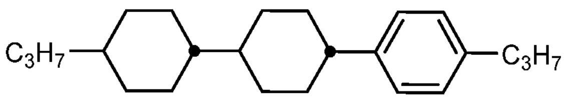
V-10b

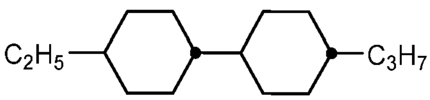
IV-1-1.

The compounds V-10b and IV-1-1 are preferably present in the mixture in a concentration of 15 to 35 %, particularly preferably 15 to 25 % and especially preferably 18 to 22 %, based on the mixture as a whole.

Very particularly preferred LC media comprise one, two or three of the following three compounds:

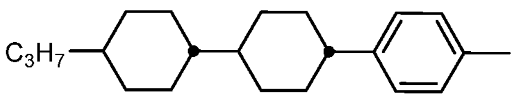
V-10a

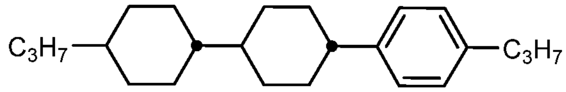

V-10b

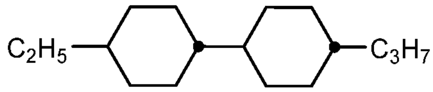

IV-1-1.

The compounds V-10a, V-10b and IV-1-1 are preferably present in the mixture in a concentration of 15 to 35 %, particularly preferably 15 to 25 % and especially preferably 18 to 22 %, based on the mixture as a whole.

Preferred LC media comprise at least one compound selected from the group consisting of the following formulae

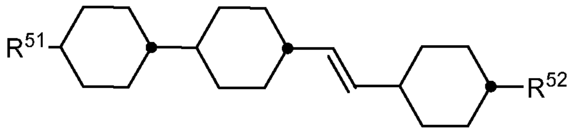

V-6

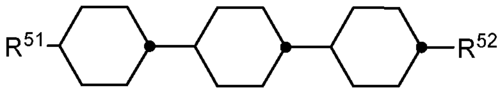

V-7

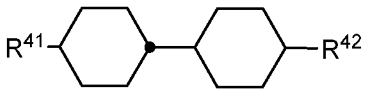

IV-1

in which $R^{41}$ and $R^{42}$, and $R^{51}$ and $R^{52}$ have the meanings indicated above. Preferably in the compounds V-6, V-7 and IV-1, $R^{41}$ and $R^{51}$ denotes alkyl or alkenyl having 1 to 6 or 2 to 6 C atoms, respectively, and $R^{42}$ and $R^{52}$ denotes alkenyl having 2 to 6 C atoms.

Preferred LC media comprise at least one compound of the formulae V-6a, V-6b, V-7a, V-7b, IV-4-1, IV-4-2, IV-3a and IV-3b:

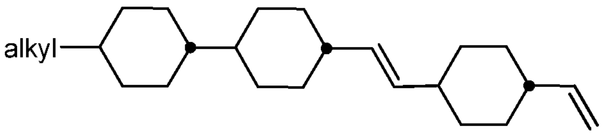

V-6a

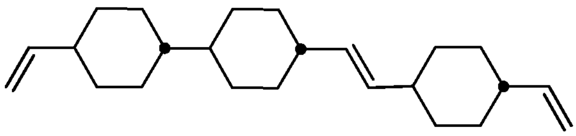

V-6b

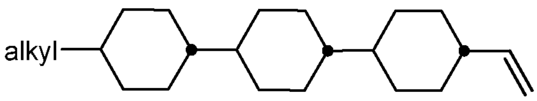

V-7a

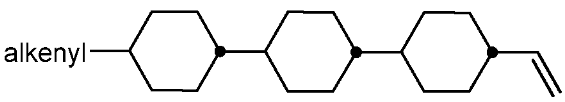

V-7b

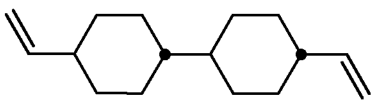

IV-4-1

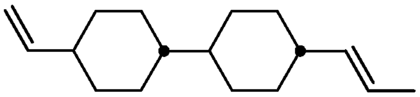

IV-4-2

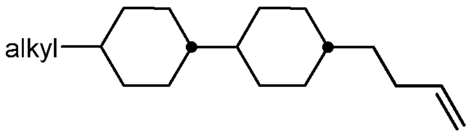

IV-3a

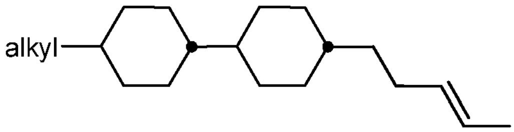

IV-3b

in which alkyl denotes an alkyl radical having 1 to 6 C atoms and alkenyl denotes an alkenyl radical having 2 to 6 C atoms.

The compounds of the formulae V-6a, V-6b, V-7a, V-7b, IV-4-1, IV-4-2, IV-3a and IV-3b are preferably present in the LC media according to the invention in amounts of 1 to 40 % by weight, preferably 5 to 35 % by weight and very particularly preferably 10 to 30 % by weight.

In a preferred embodiment of the present invention the LC medium additionally comprises one or more compounds selected from the group consisting of formulae VI-1 to VI-9

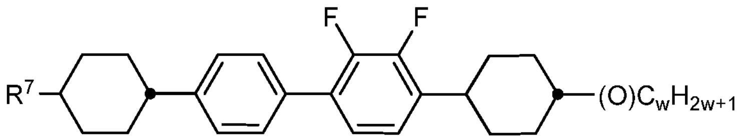

VI-1

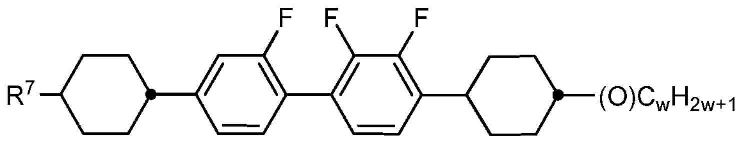

VI-2

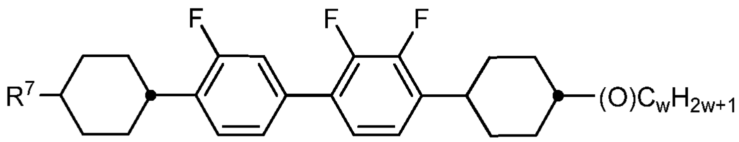

VI-3

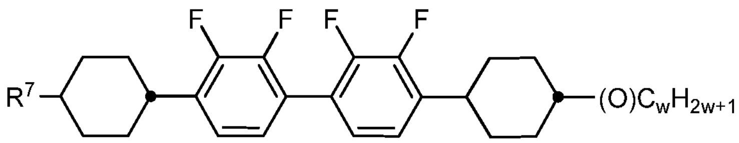

VI-4

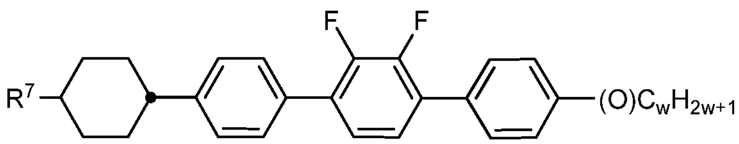

VI-5

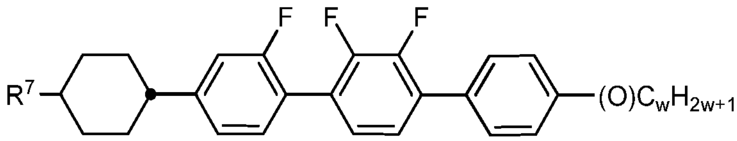

VI-6

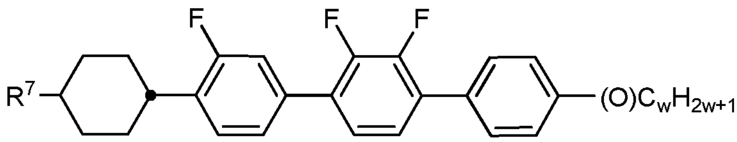

VI-7

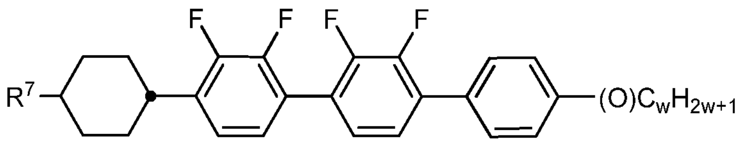

VI-8

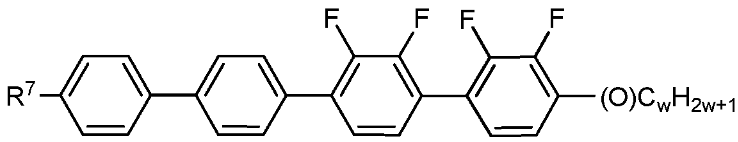

VI-9

in which

| | |
|---|---|
| $R^7$ | each, independently of one another, have one of the meanings indicated for $R^{2A}$ in formula IIA, and |
| w and x | each, independently of one another, denote 1 to 6. |

Particular preference is given to LC media comprising at least one compound of the formula V-9.

In a preferred embodiment of the present invention the LC medium additionally comprises one or more compounds selected from the group consisting of the formulae VII-1 to VII-25,

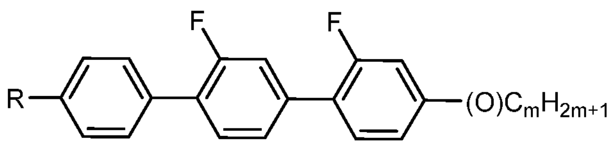

VII-1

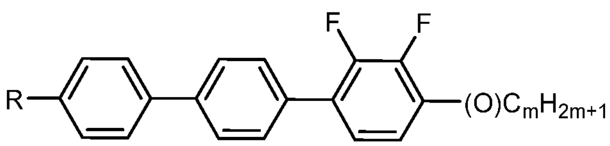

VII-2

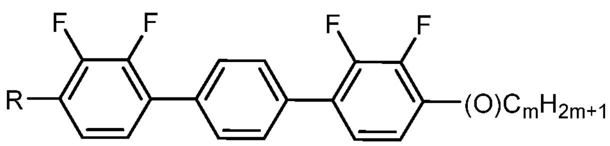

VII-3

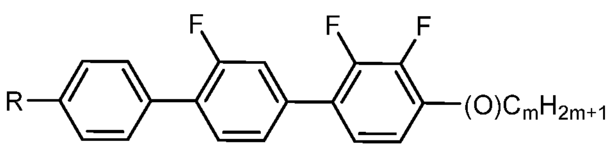

VII-4

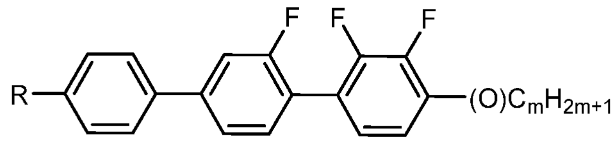

VII-5

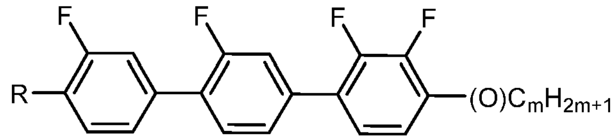

VII-6

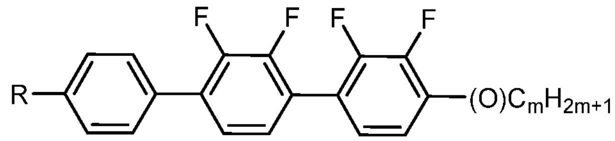

VII-7

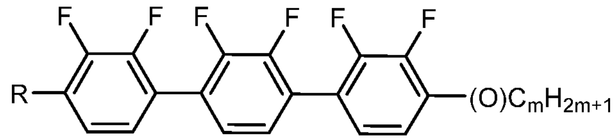

VII-8

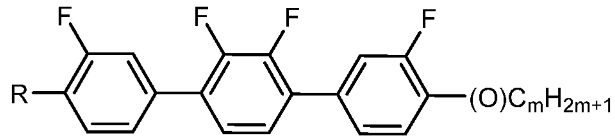

VII-9

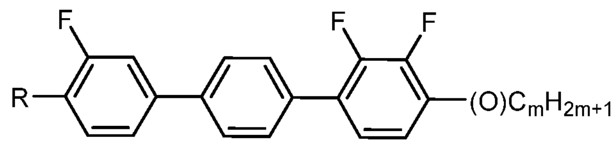

VII-10

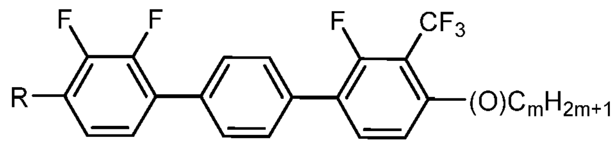

VII-11

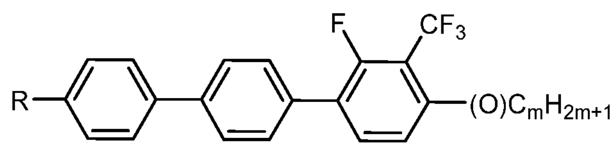

VII-12

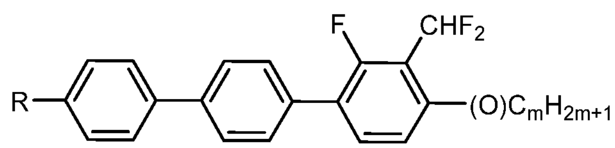

VII-13

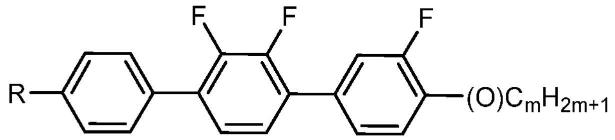

VII-14

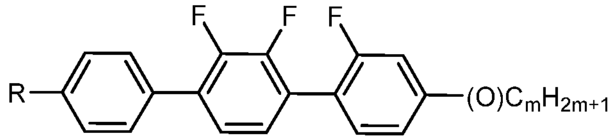

VII-15

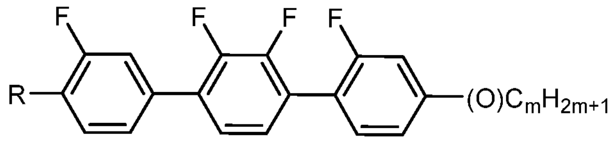

VII-16

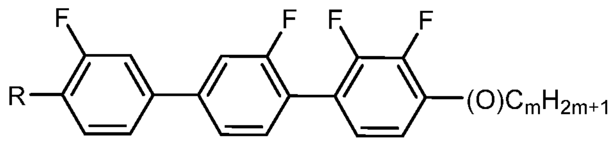

VII-17

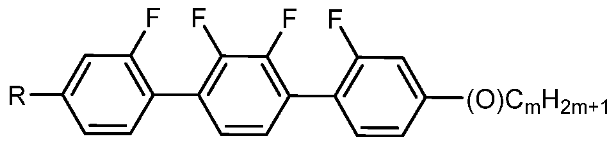

VII-18

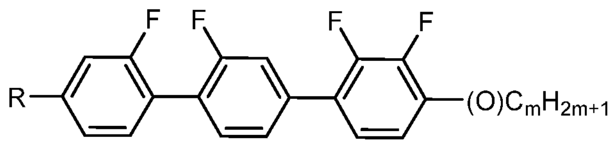

VII-19

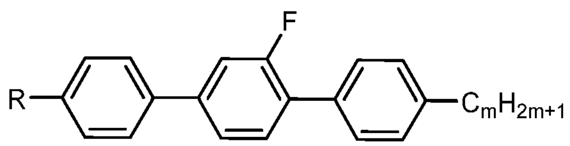

VII-20

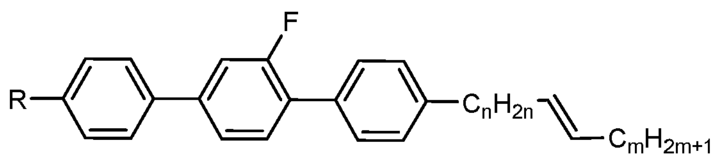

VII-21

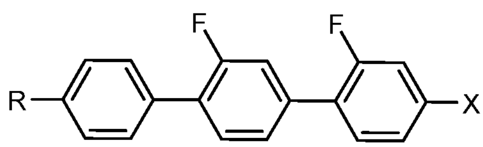

VII-22

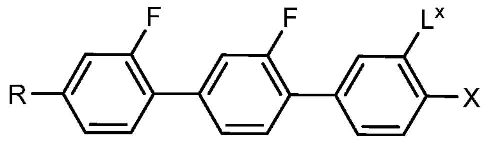

VII-23

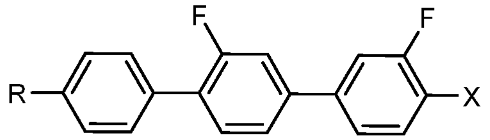

VII-24

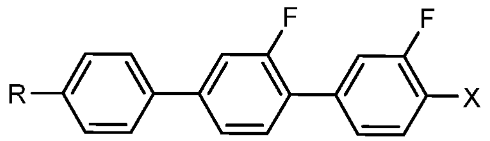

VII-25

in which

R denotes a straight-chain alkyl or alkoxy radical having 1 to 6 C atoms, (O) denotes -O- or a single bond, X denotes F, Cl, $OCF_3$ or $OCHF_2$, $L^x$ denotes H or F, m is 0, 1, 2, 3, 4, 5 or 6 and n is 0, 1, 2, 3 or 4.

R preferably denotes methyl, ethyl, propyl, butyl, pentyl, hexyl, methoxy, ethoxy, propoxy, butoxy, pentoxy.

X preferably denotes F or $OCH_3$, very preferably F.

The LC medium according to the invention preferably comprises the terphenyls of the formulae VII-1 to VII-25 in amounts of 2 to 30 % by weight, in particular 5 to 20 % by weight.

Particular preference is given to compounds of the formulae VII-1, VII-2, VII-4, VII-20, VII-21, and VII-22 wherein X denotes F. In these compounds, R preferably denotes alkyl, furthermore alkoxy, each having 1 to 5 C atoms. In the compounds of the formula VII-20, R preferably denotes alkyl or alkenyl, in particular alkyl. In the compounds of the formula VII-21, R preferably denotes alkyl. In the compounds of the formulae VII-22 to VII-25, X preferably denotes F.

The terphenyls of formula VII-1 to VII-25 are preferably employed in the LC media according to the invention if the $\Delta n$ value of the mixture is to be $\geq 0.1$. Preferred LC media comprise 2 to 20 % by weight of one or more terphenyl compounds selected from the group of the compounds of formulae VII-1 to VII-25.

Further preferred embodiments are listed below:

a) LC medium comprising at least one compound selected from the group consisting of formulae Z-1 to Z-14,

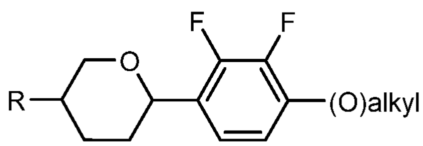

Z-1

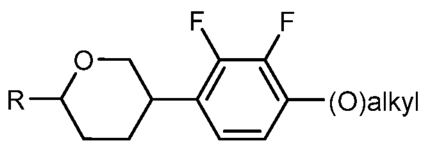

Z-2

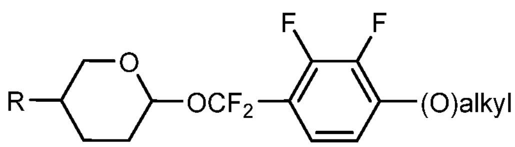

Z-3

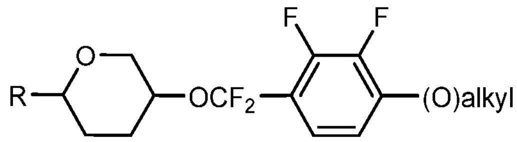

Z-4

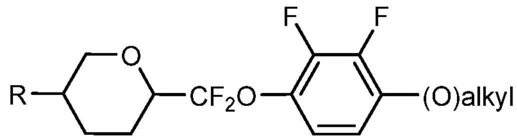

Z-5

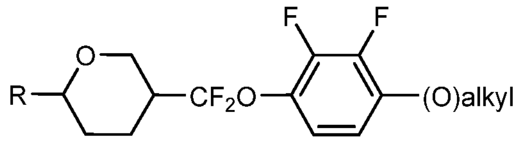

Z-6

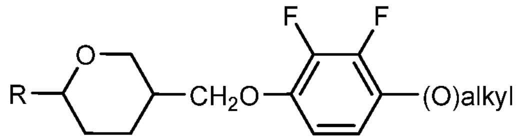

Z-7

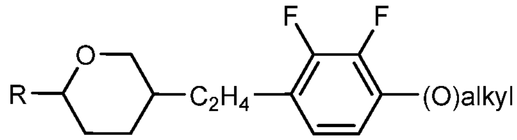

Z-8

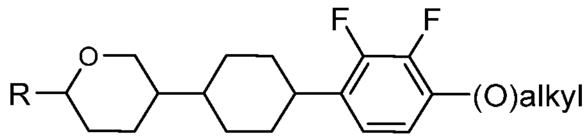

Z-9

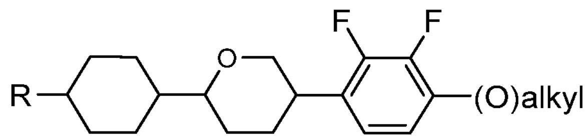

Z-10

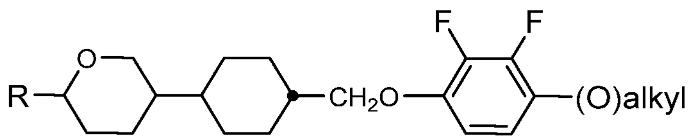

Z-11

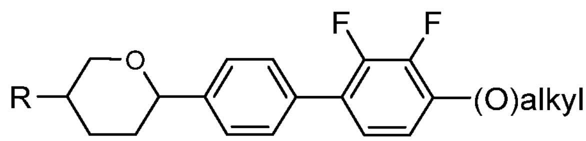

Z-12

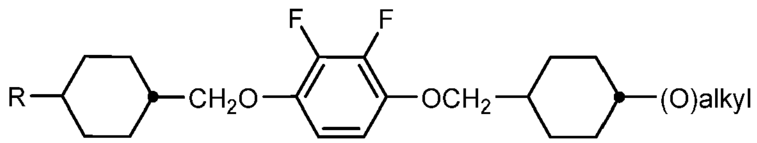

Z-13

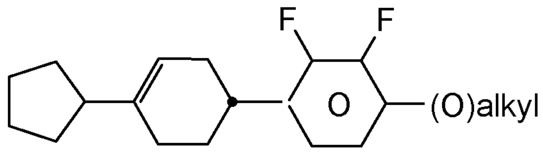

Z-14

in which R, (O) and "alkyl" have the meanings indicated above for formula III.

b) Preferred LC media according to the invention comprise one or more substances which contain a tetrahydronaphthyl or naphthyl unit, such as, for example, the compounds of the formulae N-1 to N-5,

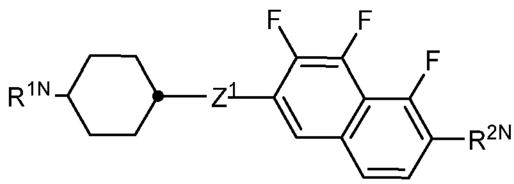

N-1

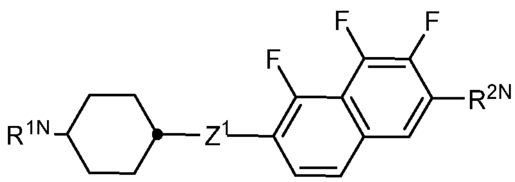

N-2

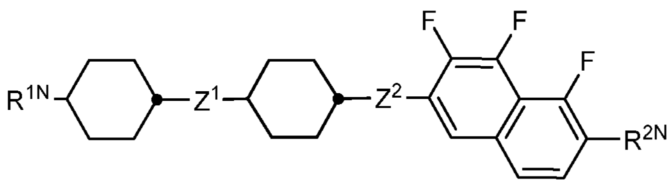

N-3

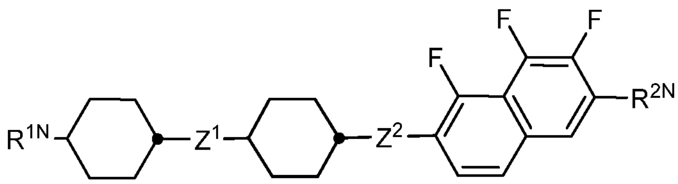

N-4

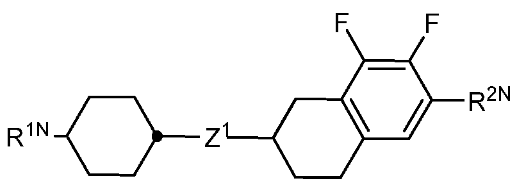

N-5

in which $R^{1N}$ and $R^{2N}$ each, independently of one another, have the meanings indicated for $R^{2A}$, preferably denote straight-chain alkyl, straight-chain alkoxy or straight-chain alkenyl, and

$Z^1$ and $Z^2$ each, independently of one another, denote $-C_2H_4-$, -CH=CH-, $-(CH_2)_4-$, $-(CH_2)_3O-$, $-O(CH_2)_3-$,$-CH=CHCH_2CH_2-$, $-CH_2CH_2CH=CH-$, $-CH_2O-$, $-OCH_2-$,-COO-, -OCO-, $-C_2F_4-$, -CF=CF-, -CF=CH-, -CH=CF-, $-CF_2O-$, $-OCF_2-$, $-CH_2-$ or a single bond.

c) Preferred LC media comprise one or more compounds selected from the group of the difluorodibenzochroman compounds of the formula BC, chromans of the formula CR, and fluorinated phenanthrenes of the formulae PH-1 and PH-2,

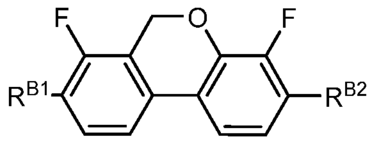
BC

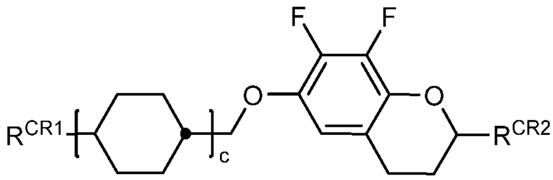
CR

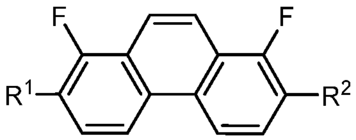
PH-1

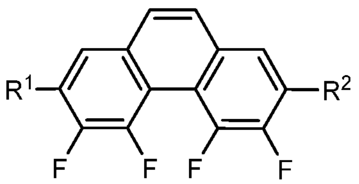
PH-2

in which

$R^{B1}$, $R^{B2}$, $R^{CR1}$, $R^{CR2}$, $R^1$, $R^2$ each, independently of one another, have the meaning of $R^{2A}$. c is 0, 1 or 2. $R^1$ and $R^2$ preferably, independently of one another, denote alkyl or alkoxy having 1 to 6 C atoms.

The LC media according to the invention preferably comprise the compounds of the formulae BC, CR, PH-1, PH-2 in amounts of 3 to 20 % by weight, in particular in amounts of 3 to 15 % by weight.

Particularly preferred compounds of the formulae BC and CR are the compounds BC-1 to BC-7 and CR-1 to CR-5,

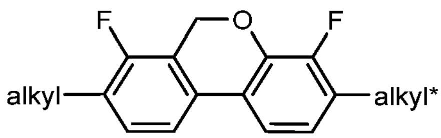
BC-1

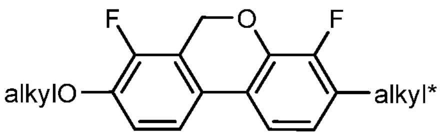
BC-2

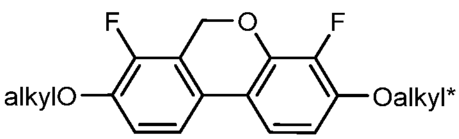
BC-3

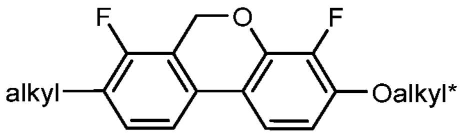

BC-4

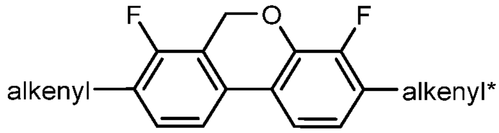

BC-5

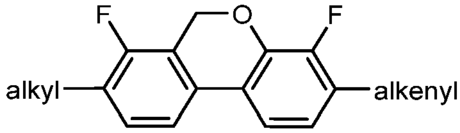

BC-6

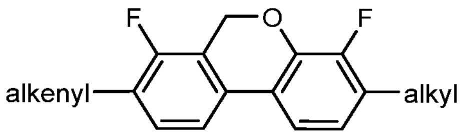

BC-7

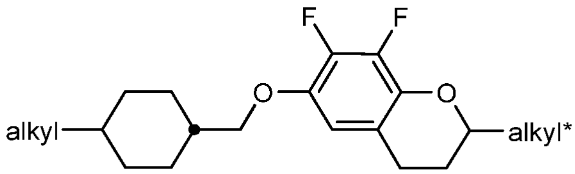

CR-1

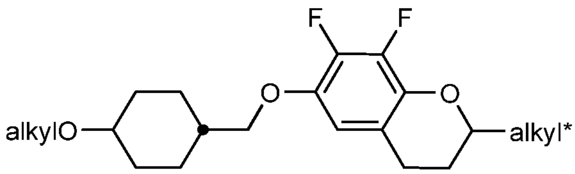

CR-2

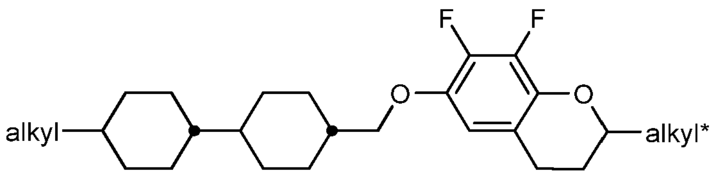

CR-3

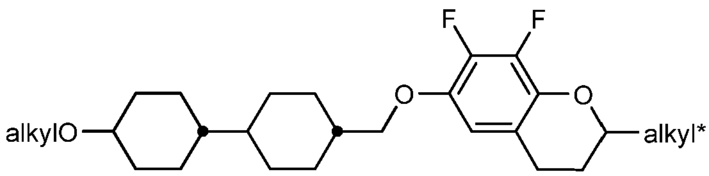

CR-4

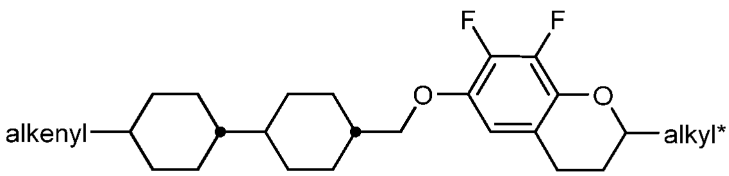

CR-5

in which

"alkyl" and "alkyl*" each, independently of one another, denote a straight-chain alkyl radical having 1 to 6 C atoms, and

"alkenyl" and "alkenyl*" each, independently of one another, denote a straight-chain alkenyl radical having 2 to 6 C atoms.

Very particular preference is given to LC media comprising one, two or three compounds of the formula BC-2, BF-1 and/or BF-2.

d) Preferred LC media comprise one or more indane compounds of the formula In,

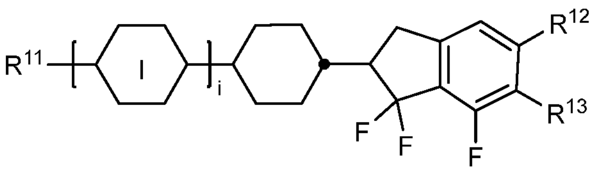

In

in which

$R^{11}$, $R^{12}$, $R^{13}$ each, independently of one another, denote a straight-chain alkyl, alkoxy, alkoxyalkyl or alkenyl radical having 1 to 6 C atoms,

$R^{12}$ and $R^{13}$ additionally denote halogen, preferably F,

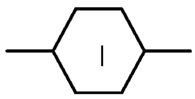

denotes

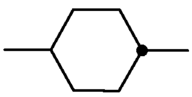 , 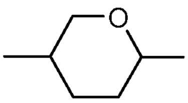 , 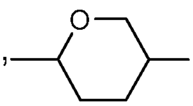 , 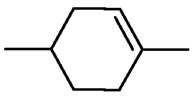 ,

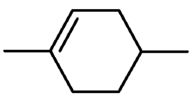 , 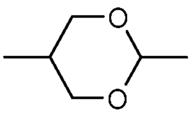 , 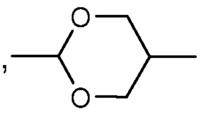 , 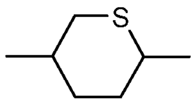 ,

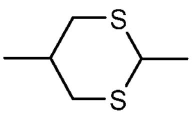 , 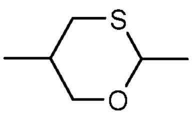 ,

i denotes 0, 1 or 2.

Preferred compounds of the formula In are the compounds of the formulae In-1 to In-16 indicated below:

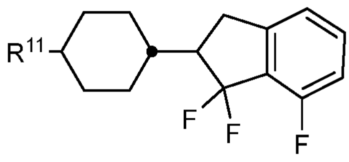

In-1

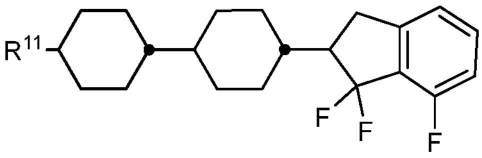

In-2

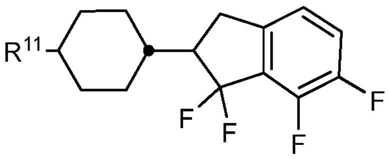

In-3

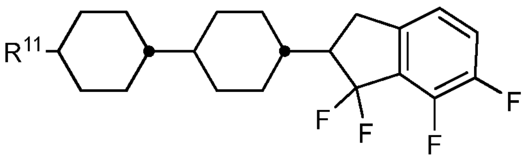

In-4

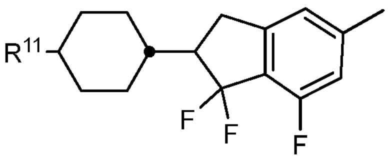

In-5

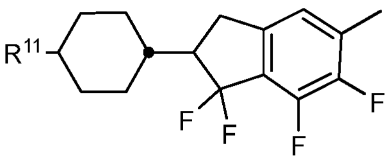

In-6

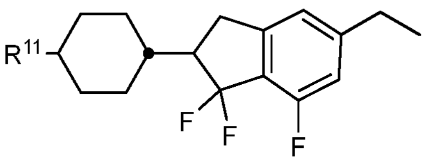

In-7

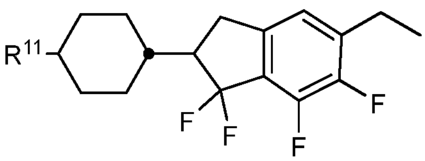

In-8

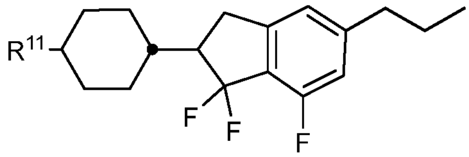

In-9

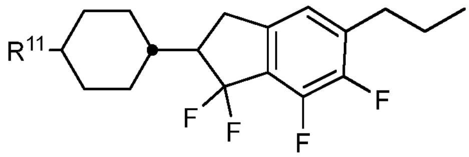

In-10

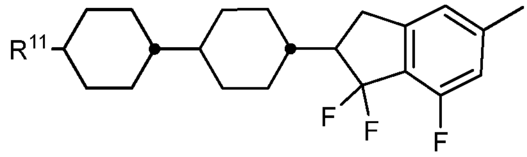

In-11

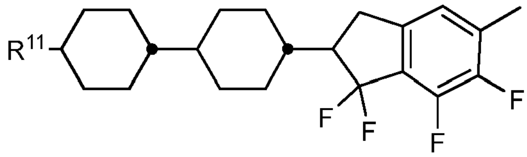

In-12

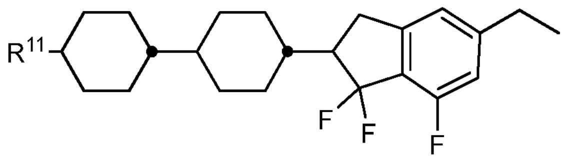

In-13

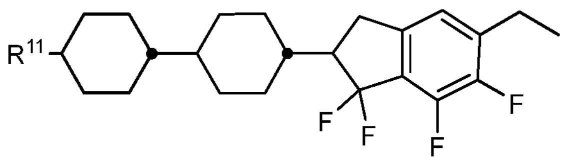

In-14

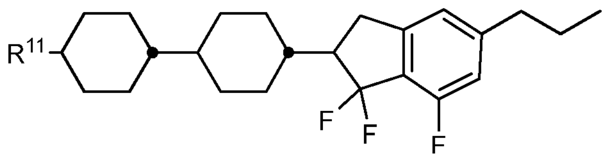

In-15

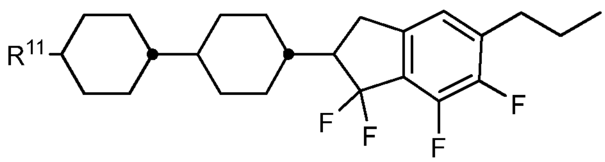

In-16

Particular preference is given to the compounds of the formulae In-1, In-2, In-3 and In-4.

The compounds of the formula In and the sub-formulae In-1 to In-16 are preferably employed in the LC media according to the invention in concentrations ≥ 5 % by weight, in particular 5 to 30 % by weight and very particularly preferably 5 to 25 % by weight.

e) Preferred LC media additionally comprise one or more compounds of the formulae L-1 to L-5,

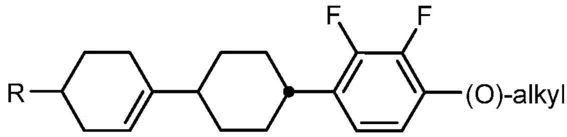

L-1

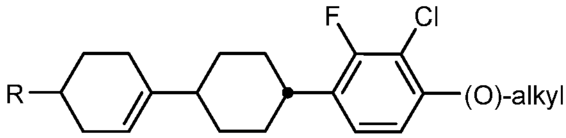

L-2

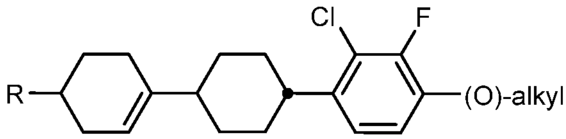

L-3

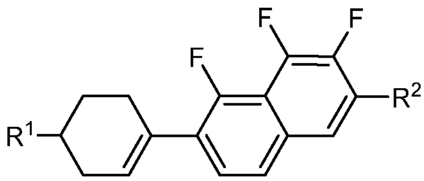

L-4

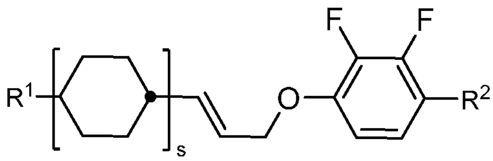

L-5

in which
R and $R^1$ each, independently of one another, have the meanings indicated for $R^{2A}$ in formula IIA above, and alkyl denotes an alkyl radical having 1 to 6 C atoms. The parameter s denotes 1 or 2. The compounds of the formulae L-1 to L-5 are preferably employed in concentrations of 5 to 50 % by weight, in particular 5 to 40 % by weight and very particularly preferably 10 to 40 % by weight.

f) Preferred LC media additionally comprise one or more compounds of formula IIA-Y

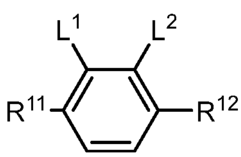

IIA-Y

in which $R^{11}$ and $R^{12}$ have one of the meanings given for $R^{2A}$ in formula IIA above, and $L^1$ and $L^2$, identically or differently, denote F or Cl.

Preferred compounds of the formula IIA-Y are selected from the group consisting of the following subformulae

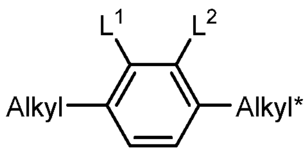

IIA-Y1

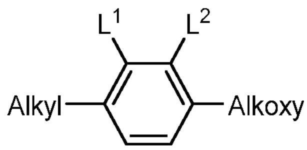

IIA-Y2

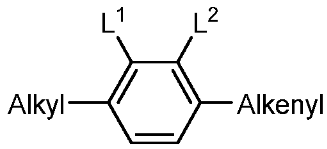

IIA-Y3

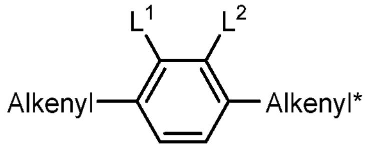

IIA-Y4

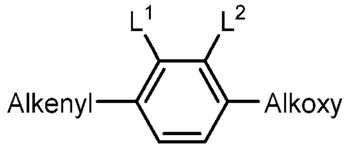

IIA-Y5

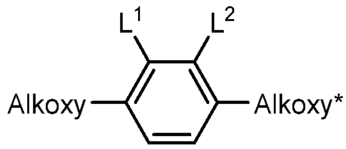

IIA-Y6

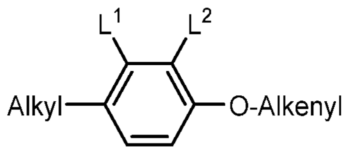

IIA-Y7

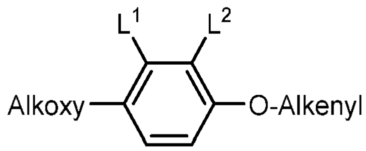

IIA-Y8

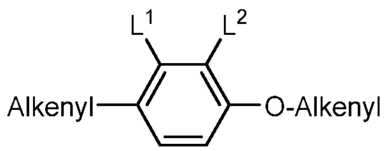

IIA-Y9

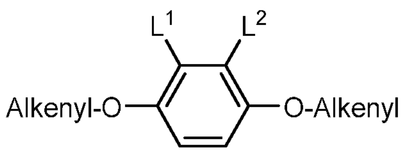

IIA-Y10

in which, Alkyl and Alkyl* each, independently of one another, denote a straight-chain alkyl radical having 1-6 C atoms, Alkoxy denotes a straight-chain alkoxy radical having 1-6 C atoms, Alkenyl and Alkenyl* each, independently of one another, denote a straight-chain alkenyl radical having 2-6 C atoms, and O denotes an oxygen atom or a single bond. Alkenyl and Alkenyl* preferably denote $CH_2$=CH-, $CH_2$=$CHCH_2CH_2$-, $CH_3$-CH=CH-,

$CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred compounds of the formula IIA-Y are selected from the group consisting of following sub-formulae:

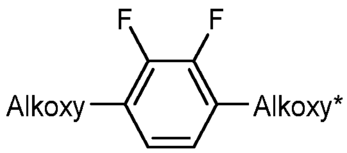

IIA-Y6a

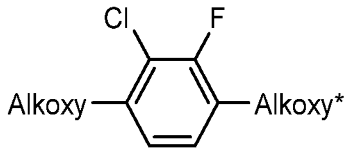

IIA-Y6b

in which Alkoxy and Alkoxy* have the meanings defined above and preferably denote methoxy, ethoxy, n-propyloxy, n-butyloxy or n-pentyloxy.

g) LC medium which additionally comprises one or more quaterphenyl compounds selected from the following formula:

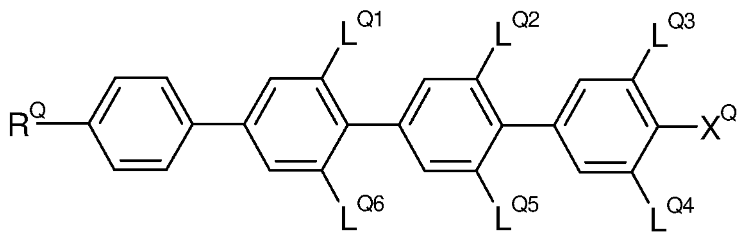

Q

wherein

$R^Q$ is alkyl, alkoxy, oxaalkyl or alkoxyalkyl having 1 to 9 C atoms or alkenyl or alkenyloxy having 2 to 9 C atoms, all of which are optionally fluorinated,

$X^Q$ is F, Cl, halogenated alkyl or alkoxy having 1 to 6 C atoms or halogenated alkenyl or alkenyloxy having 2 to 6 C atoms,

$L^{Q1}$ to $L^{Q6}$ independently of each other are H or F, with at least one of $L^{Q1}$ to $L^{Q6}$ being F.

Preferred compounds of formula Q are those wherein $R^Q$ denotes straight-chain alkyl with 2 to 6 C-atoms, very preferably ethyl, n-propyl or n-butyl.

Preferred compounds of formula Q are those wherein $L^{Q3}$ and $L^{Q4}$ are F. Further preferred compounds of formula Q are those wherein $L^{Q3}$, $L^{Q4}$ and one or two of $L^{Q1}$ and $L^{Q2}$ are F.

Preferred compounds of formula Q are those wherein $X^Q$ denotes F or $OCF_3$, very preferably F.

The compounds of formula Q are preferably selected from the following subformulae

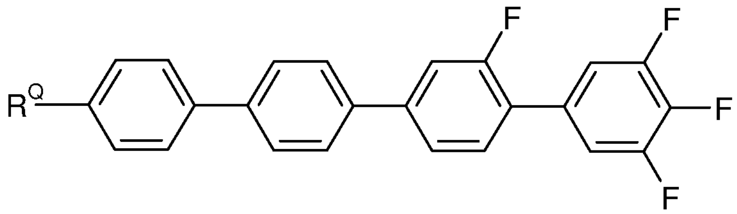

Q1

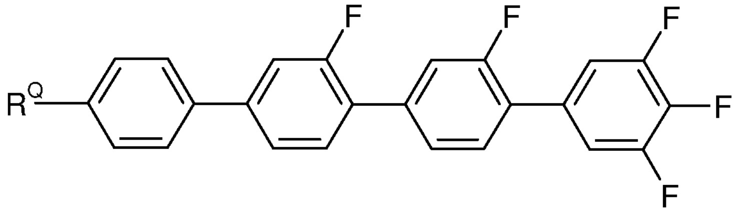

Q2

wherein $R^Q$ has one of the meanings of formula Q or one of its preferred meanings given above and below, and is preferably ethyl, n-propyl or n-butyl.

Especially preferred are compounds of formula Q1, in particular those wherein $R^Q$ is n-propyl.

Preferably the proportion of compounds of formula Q in the LC host mixture is from >0 to ≤5% by weight, very preferably from 0.05 to 2% by weight, more preferably from 0.1 to 1% by weight, most preferably from 0.1 to 0.8% by weight.

Preferably the LC medium contains 1 to 5, preferably 1 or 2 compounds of formula Q.

The addition of quaterphenyl compounds of formula Q to the LC host mixture enables to reduce ODF mura, whilst maintaining high UV absorption, enabling quick and complete polymerization, enabling strong and quick tilt angle generation, and increasing the UV stability of the LC medium.

Besides, the addition of compounds of formula Q, which have positive dielectric anisotropy, to the LC medium with negative dielectric anisotropy allows a better control of the values of the dielectric constants $\varepsilon_{\parallel}$ and $\varepsilon_{\perp}$, and in particular enables to achieve a high value of the dielectric constant $\varepsilon_{\parallel}$ while keeping the dielectric anisotropy $\Delta\varepsilon$ constant, thereby reducing the kick-back voltage and reducing image sticking.

The LC media according to the invention preferably comprise

- one or more polymerizable compounds of formula I or its subformulae, preferably in a total concentration in the range of from 0.01% to 2.0%, more preferably from 0.05% to 1.0%, most preferably from 0.2% to 0.8%, and/or
- one or more compounds of formula IIA, preferably in a total concentration in the range of from 5% to 30%, more preferably from 7% to 25%, particularly preferably from 10% to 20%; and/or
- one or more compounds of formulae IIA and IIB, preferably in a total concentration in the range of from 30% to 45%; and/or
- one or more compounds of formula IV, preferably in a total concentration in the range of from 35% to 70%, more preferably from 40 % to 65%, particularly preferably from 45% to 60%; and/or
- one or more compounds of formula IV-3, preferably in a total concentration in the range of from 35% to 60%, more preferably from 40 % to 55%, particularly preferably from 45% to 50%; and/or
- one or more compounds of formula III-2, preferably of formula III-2-6, preferably in a total concentration in the range of from 2% to 25%, more preferably from 5% to 15%, particularly preferably from 5 to 12%.

In particular, the medium comprises

- one or more compounds CY-n-Om, in particular CY-3-O4, CY-5-O4 and/or CY-3-O2, preferably in a total concentration in the range of from 5% to 30%, preferably 10% to 20%;
and/or

- one or more compounds PY-n-Om, in particular PY-3-O2 and/or PY-1-O2, preferably in a total concentration in the range of from 5% to 30%, preferably 5% to 20%;
and/or
- CPY-n-Om, in particular CPY-2-O2, CPY-3-O2 and/or CPY-5-O2, preferably in concentrations > 5%, in particular 7% to 20%, based on the mixture as a whole,
and/or
- one or more compounds CCY-n-Om, preferably CCY-4-O2, CCY-3-O2, CCY-3-O3, CCY-3-O1 and/or CCY-5-O2, preferably in concentrations > 3%, in particular 5 to 15%, based on the mixture as a whole;
and/or
- one or more compounds CPY-n-Om, preferably CPY-2-O2 and/or CPY-3-O2, preferably in concentrations > 3%, in particular 5 to 15%, based on the mixture as a whole;
and/or
- CLY-n-Om, preferably CLY-2-O4, CLY-3-O2 and/or CLY-3-O3, preferably in concentrations > 5%, in particular 10 to 30%, very preferably 15 to 20%, based on the mixture as a whole;
and/or
- CPY-n-Om and CY-n-Om, preferably in concentrations of 10 to 80%,
based on the mixture as a whole,
and/or
- CPY-n-Om and PY-n-Om, preferably CPY-2-O2 and/or CPY-3-O2 and PY-3-O2 or PY-1-O2, preferably in concentrations of 5 to 20%, more preferably 10 to 15% to based on the mixture as a whole,
and/or
- CC-3-V, preferably in concentrations of 5 to 50%, based on the mixture as a whole.
and/or
- the compound of the formula CC-3-V1, in a total concentration in the range of from 5 to 40%, more preferably from 15% to 35%, particularly preferably from 20% to 30%,
and/or
- one or more compounds of formula B-nO-Om and/or B(S)-nO-Om, in particular the compound B(S)-2O-O4 and/or B(S)-2O-O5, preferably in a concentration in the range of from 2 to 12 %.
and/or
- 0.1% to 3% of the compound PPGU-3-F,
and/or
- the compound B(S)-(c5)1O-O2:

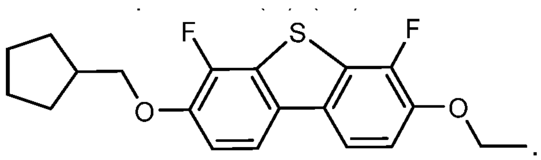

The LC medium preferably according to the present invention has negative dielectric anisotropy.

More preferably the LC medium according to the present invention does not contain a compound having positive dielectric anisotropy, except for the the compounds of formula Q as described below. Most preferably the LC medium does not contain a compound having positive dielectric anisotropy.

In another preferred embodiment the LC medium according to the present invention does not contain a compound of formula G

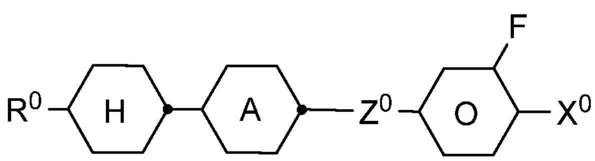

G

in which the individual radicals, on each occurrence identically or differently, and each, independently of one another, have the following meaning:

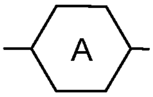

denotes

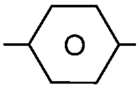 , 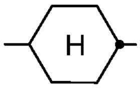 , 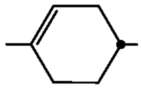 , 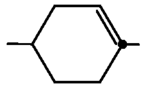

or 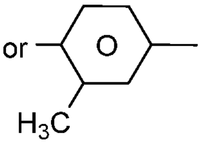

$R^0$ denotes a straight chain or branched alkyl or alkoxy radical having 1 to 15 C atoms, where one or more $CH_2$ groups in these radicals may each be replaced, independently of one another, by

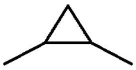 , 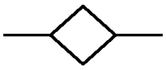 , 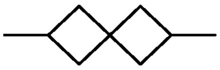 ,

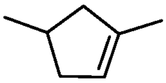 , 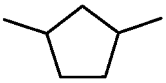 ,

-C=C-, $-CF_2O-$, $-OCF_2-$, -CH=CH-, -O-, -CO-O- or -O-CO- in such a way that O atoms are not linked directly to one another, and in which, in addition, one or more H atoms may be replaced by halogen, preferably by F,

$X^0$ denotes F, Cl, CN, $SF_5$, SCN, NCS, a halogenated alkyl radical, a halogenated alkenyl radical, a halogenated alkoxy radical or a halogenated alkenyloxy radical having up to 6 C atoms,

$Z^0$ denotes $-C_2H_4-$, $-CH_2O-$, $CF_2O$, -CH=CH- or a single bond.

The invention furthermore relates to an electro-optical display having active-matrix addressing, characterised in that it contains, as dielectric, an LC medium according to the present invention, and wherein the display is a VA, SA-VA, IPS, U-IPS, FFS, UB-FFS, SA-FFS, PS-VA, PS-OCB, PS-IPS, PS-FFS, PS-UB-FFS, PS-posi-VA, PS-TN, polymer stabilised SA-VA or polymer stabilised SA-FFS display.

It is advantageous for the liquid-crystalline medium according to the invention to preferably have a nematic phase from ≤ -20°C to ≥ 70°C, particularly preferably from ≤ -30°C to ≥ 80°C, very particularly preferably from ≤ -40°C to ≥ 90°C.

The medium according to the invention preferably has a clearing temperature of 70°C or more, very preferably of 74° C or more.

The LC medium has preferably a nematic LC phase.

The expression "have a nematic phase" here means on the one hand that no smectic phase and no crystallisation are observed at low temperatures at the corresponding temperature and on the other hand that clearing still does not occur on heating from the nematic phase. The investigation at low temperatures is carried out in a flow viscometer at the corresponding temperature and checked by storage in test cells having a layer thickness corresponding to the electro-optical use for at least 100 hours. If the storage stability at a temperature of -20°C in a corres ponding test cell is 1000 h or more, the medium is referred to as stable at this temperature. At temperatures of -30°C and -40°C, the corresponding times are 500 h and 250 h respectively. At high temperatures, the clearing point is measured by conventional methods in capillaries.

The LC medium preferably has a nematic phase range of at least 60 K and a flow viscosity $v_{20}$ of at most 30 $mm^2 \cdot s^{-1}$ at 20°C.

The LC medium is preferably nematic at a temperature of -20°C or less, preferably at -30°C or less, very preferably at -40 °C or less.

The values of the birefringence $\Delta n$ of the LC medium according to the present invention are generally between 0.07 and 0.16, preferably between 0.08 and 0.15, very preferably between 0.09 and 0.14.

In a preferred embodiment, the LC medium according to the present invention has a birefringence in the range of from 0.090 to 0.110, preferably from 0.095 to 0.105, in particular from 0.100 to 0.105.

In another preferred embodiment, the LC medium according to the present invention has a birefringence of 0.120 or more, preferably in the range of from 0.125 to 0.145, more preferably from 0.130 to 0.140.

The LC medium according to the present invention preferably has a dielectric anisotropy $\Delta\varepsilon$ of -1.5 to -8.0, preferably of -2.0 to - 4.0, in particular -2.5 to -3.5,

The LC medium according to the present invention preferably has a rotational viscosity $\gamma_1$ at 20°C of ≤ 120 mPa·s, in particular ≤ 100 mPa·s.

In a preferred embodiment, the rotational viscosity $\gamma_1$ at 20°C is ≤ 100mPa·s, in particular ≤ 95 mPa·s.

The LC medium according to the present invention preferably has relatively low values for the threshold voltage ($V_0$). They are preferably in the range from 1.7 V to 3.0 V, particularly preferably ≤ 2.7 V and very particularly preferably ≤ 2.5 V.

For the present invention, the term "threshold voltage" relates to the capacitive threshold ($V_0$), also called the Freedericks threshold, unless explicitly indicated otherwise.

The LC medium according to the present invention preferably has high values for the voltage holding ratio in liquid-crystal cells.

In general, LC media having a low addressing voltage or threshold voltage exhibit a lower voltage holding ratio than those having a higher addressing voltage or threshold voltage and vice versa.

For the present invention, the term "dielectrically positive compounds" denotes compounds having a $\Delta\varepsilon$ > 1.5, the term "dielectrically neutral compounds" denotes those having -1.5 ≤ $\Delta\varepsilon$ ≤ 1.5 and the term "dielectrically negative compounds" denotes those having $\Delta\varepsilon$ < -1.5. The dielectric anisotropy of the compounds is determined here by dissolving 10 % of the compounds in a liquid-crystalline host and determining the capacitance of the resultant mixture in at least one test cell in each case having a layer thickness of 20 μm with homeotropic and with homogeneous surface alignment at 1 kHz. The measurement voltage is typically 0.5 V to 1.0 V, but is always lower than the capacitive threshold of the respective liquid-crystal mixture investigated.

All temperature values indicated for the present invention are in °C.

The LC media according to the invention are suitable for all VA-TFT (vertical alignment-thin film transistor) applications, such as, for example, VAN (vertically aligned nematic), MVA (multidomain VA), (S)-PVA (super patterned VA), ASV (advanced super view, or axially symmetric VA), PSA (polymer sustained VA) and PS-VA (polymer stabilized VA). They are furthermore suitable for IPS (in-plane switching) and FFS (fringe field switching) applications having negative $\Delta\varepsilon$.

The nematic LC media in the displays according to the invention generally comprise two components NA and NB, which themselves consist of one or more individual compounds.

Component NA has significantly negative dielectric anisotropy and gives the nematic phase a dielectric anisotropy of ≤ -0.5. Besides one or more compounds of the formula I, it preferably comprises the compounds of the formulae IIA, IIB and/or IIC, furthermore one or more compounds of the formula IV-1.

The proportion of component NA is preferably between 45 and 100 %, in particular between 60 and 85 %.

For component NA, one (or more) individual compound(s) which has (have) a value of $\Delta\varepsilon$ ≤ -0.8 is (are) preferably selected. This value must be more negative, the smaller the proportion of NA in the mixture as a whole.

Component NB has pronounced nematogeneity and a flow viscosity of not greater than 30 $mm^2 \cdot s^{-1}$, preferably not greater than 25 $mm^2 \cdot s^{-1}$, at 20°C.

Particularly preferred individual compounds in component NB are extremely low-viscosity nematic liquid crystals having a flow viscosity of not greater than 18 $mm^2 \cdot s^{-1}$, preferably not greater than 12 $mm^2 \cdot s^{-1}$, at 20°C.

Component NB is monotropically or enantiotropically nematic, has no smectic phases and is able to prevent the occurrence of smectic phases down to very low temperatures in LC media. For example, if various materials of high nematogeneity are added to a smectic liquid-crystal mixture, the nematogeneity of these materials can be compared through the degree of suppression of smectic phases that is achieved.

The mixture may optionally also comprise a component NC, comprising compounds having a dielectric anisotropy of $\Delta\varepsilon$ ≥1.5. These so-called positive compounds are generally present in a mixture of negative dielectric anisotropy in amounts of ≤ 20 % by weight, based on the mixture as a whole.

Besides one or more compounds of the formula I or its subformulae, the medium preferably comprises 4 to 15, in particular 5 to 12, and particularly preferably < 10, compounds of the formulae IIA, IIB and/or IIC and optionally one or more compounds of the formula IV-1.

Besides compounds of the formula I or its subformulae and the compounds of the formulae IIA, IIB and/or IIC and optionally IV-1, other constituents may also be present, for example in an amount of up to 45 % of the mixture as a whole, but preferably up to 35 %, in particular up to 10 %.

The other constituents are preferably selected from nematic or nemato-genic substances, in particular known substances, from the classes of the azoxybenzenes, benzylideneanilines, biphenyls, terphenyls, phenyl or cyclohexyl benzoates, phenyl or cyclohexyl cyclohexanecarboxylates, phenylcyclohexanes, cyclohexylbiphenyls, cyclohexylcyclohexanes, cyclo-hexylnaphthalenes, 1 ,4-biscyclohexylbiphenyls or cyclohexylpyrimidines, phenyl- or cyclohexyldioxanes, optionally halogenated stilbenes, benzyl phenyl ethers, tolanes and substituted cinnamic acid esters.

The most important compounds which are suitable as constituents of liquid-crystal phases of this type can be characterised by the formula IV

$$R^{20}\text{-L-G-E-}R^{21} \qquad \text{IV}$$

in which L and E each denote a carbo- or heterocyclic ring system from the group formed by 1 ,4-disubstituted benzene and cyclohexane rings, 4,4'-disubstituted biphenyl, phenylcyclohexane and cyclohexylcyclohexane systems, 2,5-disubstituted pyrimidine and 1 ,3-dioxane rings, 2,6-disubstituted naphthalene, di- and tetrahydronaphthalene, quinazoline and tetrahydroquinazoline,

| G denotes | -CH=CH- | -N(O)=N- |
|---|---|---|
| | -CH=CQ- | -CH=N(O)- |
| | -C=C- | $-CH_2-CH_2-$ |
| | -CO-O- | $-CH_2-O-$ |
| | -CO-S- | $-CH_2-S-$ |
| | -CH=N- | -COO-Phe-COO- |
| | $-CF_2O-$ | -CF=CF- |
| | $-OCF_2-$ | $-OCH_2-$ |
| | -(CH2)4- | $-(CH_2)_3O-$ |

or a C-C single bond, Q denotes halogen, preferably chlorine, or -CN, and $R^{20}$ and $R^{21}$ each denote alkyl, alkenyl, alkoxy, alkoxyalkyl or alkoxycar-bonyloxy having up to 18, preferably up to 8, carbon atoms, or one of these radicals alternatively denotes CN, NC, $NO_2$, NCS, $CF_3$, $SF_5$, $OCF_3$, F, Cl or Br.

In most of these compounds, $R^{20}$ and $R^{21}$ are different from one another, one of these radicals usually being an alkyl or alkoxy group. Other variants of the proposed substituents are also common. Many such substances or also mixtures thereof are commercially available. All these substances can be prepared by methods known from the literature.

It goes without saying for the person skilled in the art that the VA, IPS or FFS mixture according to the invention may also comprise compounds in which, for example, H, N, O, Cl and F have been replaced by the corresponding isotopes.

The combination of compounds of the preferred embodiments mentioned above with the polymerized compounds described above causes low threshold voltages, low rotational viscosities and very good low-temperature stabilities in the LC media according to the invention at the same time as constantly high clearing points and high HR values, and allows the rapid establishment of a particularly low tilt angle (i.e. a large tilt) in PSA displays. In particular, the LC media exhibit significantly shortened response times, in particular also the grey-shade response times, in PSA displays compared with the LC media from the prior art.

The LC media according to the invention may also comprise further additives which are known to the person skilled in the art and are described in the literature, such as, for example, polymerization initiators, inhibitors, stabilizers, surface-active substances or chiral dopants. These may be polymerizable or non-polymerizable. Polymerizable additives are accordingly ascribed to the polymerizable component or component A). Non-polymerizable additives are accordingly ascribed to the non-polymerizable component or component B).

The invention furthermore relates to an LC display as described above, wherein the polymerizable compounds of formula I or its subformulae and the other polymerizable comopounds contained in the LC medium are present in polymerized form.

The LC display is preferably a PSA or SA display, very preferably a PS-VA, PS-IPS, PS-FFS, PS-UB-FFS or SA-VA display.

For the production of PSA or polymer stabilised SA displays, the polymerizable compounds contained in the LC medium are polymerized by in-situ polymerization in the LC medium between the substrates of the LC display, preferably while a voltage is applied to the electrodes.

The structure of the displays according to the invention corresponds to the usual geometry for PSA displays, as described in the prior art cited at the outset. Geometries without protrusions are preferred, in particular those in which, in addition, the electrode on the colour filter side is unstructured and only the electrode on the TFT side has slots. Particularly suitable and preferred electrode structures for PS-VA displays are described, for example, in US

2006/0066793 A1.

A preferred PSA type LC display of the present invention comprises:

- a first substrate including a pixel electrode defining pixel areas, the pixel electrode being connected to a switching element disposed in each pixel area and optionally including a micro-slit pattern, and optionally a first alignment layer disposed on the pixel electrode,
- a second substrate including a common electrode layer, which may be disposed on the entire portion of the second substrate facing the first substrate, and optionally a second alignment layer,
- an LC layer disposed between the first and second substrates and including an LC medium as described above and below, wherein the polymerizable compounds may also be present in polymerized form.

The first and/or second alignment layer controls the alignment direction of the LC molecules of the LC layer. For example, in PS-VA displays the alignment layer is selected such that it imparts to the LC molecules homeotropic (or vertical) alignment (i.e. perpendicular to the surface) or tilted alignment. Such an alignment layer may for example comprise a polyimide, which may also be rubbed, or may be prepared by a photoalignment method.

The LC layer with the LC medium can be deposited between the substrates of the display by methods that are conventionally used by display manufacturers, for example the so-called one-drop-filling (ODF) method. The polymerizable component of the LC medium is then polymerized for example by UV photopolymerization. The polymerization can be carried out in one step or in two or more steps.

The PSA display may comprise further elements, like a colour filter, a black matrix, a passivation layer, optical retardation layers, transistor elements for addressing the individual pixels, etc., all of which are well known to the person skilled in the art and can be employed without inventive skill.

The electrode structure can be designed by the skilled person depending on the individual display type. For example for PS-VA displays a multidomain orientation of the LC molecules can be induced by providing electrodes having slits and/or bumps or protrusions in order to create two, four or more different tilt alignment directions.

Upon polymerization the polymerizable compounds form a copolymer, which causes a certain tilt angle of the LC molecules in the LC medium. Without wishing to be bound to a specific theory, it is believed that at least a part of the crosslinked polymer, which is formed by the polymerizable compounds, will phase-separate or precipitate from the LC medium and form a polymer layer on the substrates or electrodes, or the alignment layer provided thereon. Microscopic measurement data (like SEM and AFM) have confirmed that at least a part of the formed polymer accumulates at the LC/substrate interface.

The polymerization can be carried out in one step. It is also possible firstly to carry out the polymerization, optionally while applying a voltage, in a first step in order to produce a tilt angle, and subsequently, in a second polymerization step without an applied voltage, to polymerize or crosslink the compounds which have not reacted in the first step ("end curing").

Suitable and preferred polymerization methods are, for example, thermal or photopolymerization, preferably photopolymerization, in particular UV induced photopolymerization, which can be achieved by exposure of the polymerizable compounds to UV radiation.

Optionally one or more polymerization initiators are added to the LC medium. Suitable conditions for the polymerization and suitable types and amounts of initiators are known to the person skilled in the art and are described in the literature. Suitable for free-radical polymerization are, for example, the commercially available photoinitiators Irgacure651®, Irgacure184®, Irgacure907®, Irgacure369® or Darocure1173® (Ciba AG). If a polymerization initiator is employed, its proportion is preferably 0.001 to 5% by weight, particularly preferably 0.001 to 1% by weight.

The polymerizable compounds according to the invention are also suitable for polymerization without an initiator, which is accompanied by considerable advantages, such, for example, lower material costs and in particular less contamination of the LC medium by possible residual amounts of the initiator or degradation products thereof. The polymerization can thus also be carried out without the addition of an initiator. In a preferred embodiment, the LC medium thus does not contain a polymerization initiator.

The the LC medium may also comprise one or more stabilizers in order to prevent undesired spontaneous polymerization of the RMs, for example during storage or transport. Suitable types and amounts of stabilizers are known to the person skilled in the art and are described in the literature. Particularly suitable are, for example, the commercially available stabilizers from the Irganox® series (Ciba AG), such as, for example, Irganox® 1076. If stabilizers are employed, their proportion, based on the total amount of RMs or the polymerizable component (component A), is preferably 10-50,000 ppm, particularly preferably 50-5,000 ppm.

In a preferred embodiment the LC media contain one or more chiral dopants, preferably in a concentration from 0.01 to 1% by weight, very preferably from 0.05 to 1.0% by weight. The chiral dopants are preferably selected from the

group consisting of compounds from Table B below, very preferably from the group consisting of R- or S-1011, R- or S-2011, R- or S-3011, R- or S-4011, and R- or S-5011.

In another preferred embodiment the LC media contain a racemate of one or more chiral dopants, which are preferably selected from the chiral dopants mentioned in the previous paragraph.

In another preferred embodiment of the present invention the LC media contain one or more further stabilizers, preferably selected from the the group consisting of the following formulae

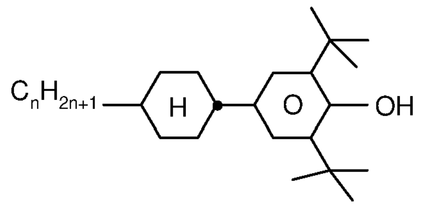

S1

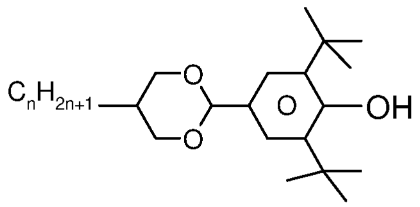

S2

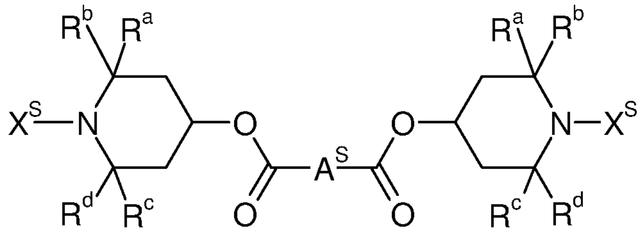

S3

wherein the individual radicals, independently of each other and on each occurrence identically or differently, have the following meanings

$R^{a-d}$ straight-chain or branched alkyl with 1 to 10, preferably 1 to 6, very preferably 1 to 4 C atoms, most preferably methyl,

$X^S$ H, $CH_3$, OH or O•,

$A^S$ straight-chain, branched or cyclic alkylene with 1 to 20 C atoms which is optionally substituted,

n an integer from 1 to 6, preferably 3.

Preferred stabilizers of formula S3 are selected from formulaS3A

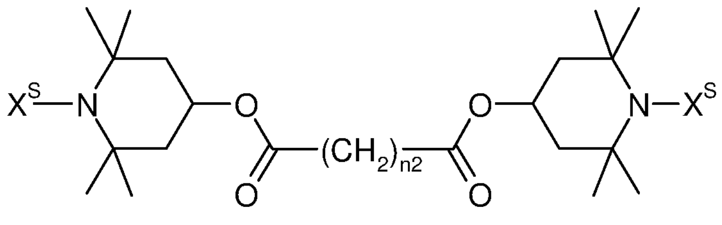

S3A

wherein n2 is an integer from 1 to 12, and wherein one or more H atoms in the group $(CH_2)_{n2}$ are optionally replaced by methyl, ethyl, propyl, butyl, pentyl or hexyl.

Very preferred stabilizers are selected from the group consisting of the following formulae

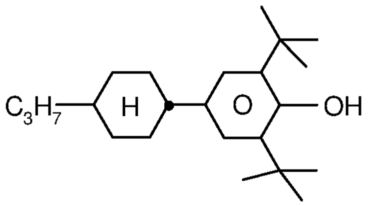

S1-1

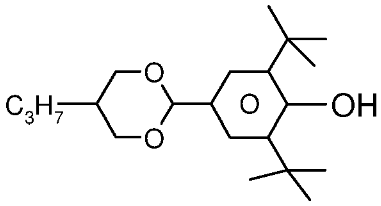

S2-1

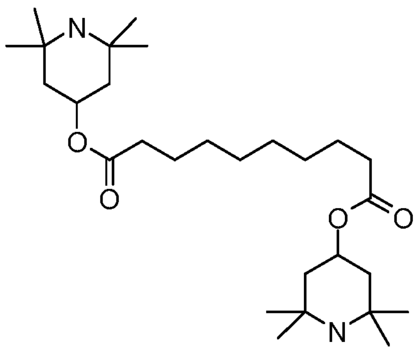

S3-1

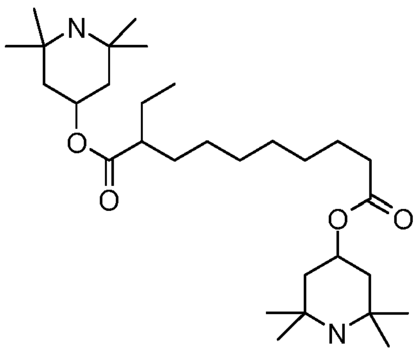

S3-2

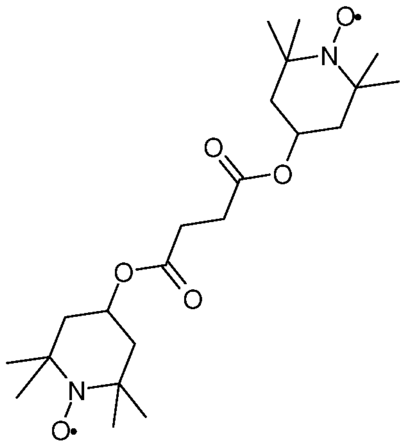

S3-3

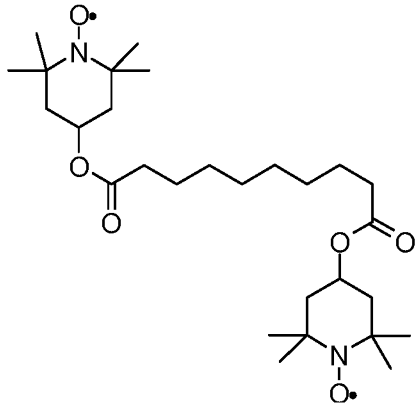

S3-4

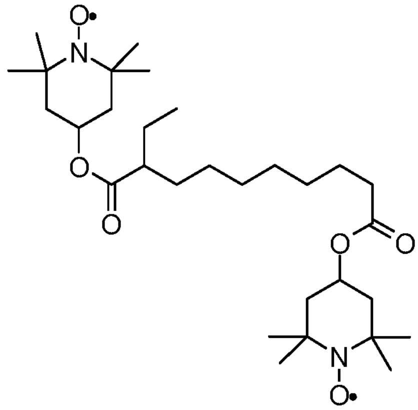

S3-5

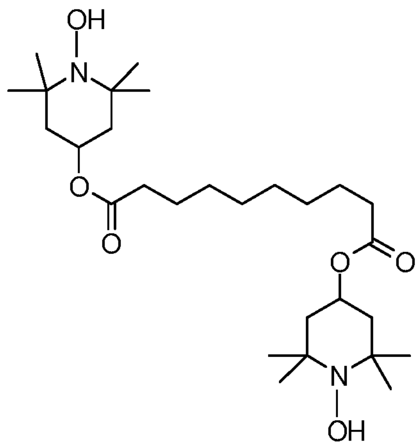

S3-6

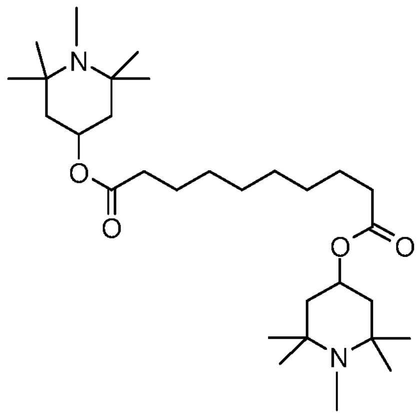

S3-7

In a preferred embodiment the liquid-crystalline medium comprises one or more stabilizers selected from the group consisting of formulae S1-1, S2-1, S3-1, S3-1 and S3-3.

In a preferred embodiment the liquid-crystalline medium comprises one or more stabilizers selected from Table C below.

Preferably the proportion of stabilizers, like those of formula S1 to S3 and their subformulae, in the liquid-crystalline medium is from 10 to 500 ppm,very preferably from 20 to 100 ppm.

In another preferred embodiment the LC medium according to the present invention contains a self alignment (SA) additive, preferably in a concentration of 0.1 to 2.5 %.

In another preferred embodiment the LC medium according to the present invention contains a self alignment (SA) additive, preferably in a concentration of 0.1 to 2.5 %.

In a preferred embodiment the SA-VA display according to the present invention does not contain a polyimide alignment layer. In another preferred embodiment the SA-VA display according to preferred embodiment contains a polyimide alignment layer.

Preferred SA additives for use in this preferred embodiment are selected from compounds comprising a mesogenic group and a straight-chain or branched alkyl side chain that is terminated with one or more polar anchor groups selected from hydroxy, carboxy, amino or thiol groups.

Further preferred SA additives contain one or more polymerizable groups which are attached, optionally via spacer groups, to the mesogenic group. These polymerizable SA additives can be polymerized in the LC medium under similar conditions as applied for the RMs in the PSA process.

Suitable SA additives to induce homeotropic alignment, especially for use in SA-VA mode displays, are disclosed for example in US 2013/0182202 A1, US 2014/0838581 A1, US 2015/0166890 A1 and US 2015/0252265 A1.

In another preferred embodiment an LC medium or a polymer stabilised SA-VA display according to the present invention contains one or more self alignment additives selected from Table E below.

In another preferred embodiment the LC medium according to the present invention contains one or more SA additives, preferably selected from Table E, in a concentration from 0.1 to 5%, very preferably from 0.2 to 3%, most preferably from 0.2 to 1.5%.

The polymerizable compounds of formula I and its subformulae do in particular show good UV absorption in, and are therefore especially suitable for, a process of preparing a PSA display including one or more of the following features:

- the polymerizable medium is exposed to UV light in the display in a 2-step process, including a first UV exposure step ("UV1 step"), with application of a voltage, to generate the tilt angle, and a second UV exposure step ("UV2 step"), without application of a voltage, to complete polymerization,
- the polymerizable medium is exposed to UV light in the display generated by an UV-LED lamp, preferably at least in the UV2 step, more preferably both in the UV1 and UV2 step.
- the polymerizable medium is exposed to UV light in the display generated by a UV lamp with a radiation spectrum that is shifted to longer wavelengths, preferably ≥340nm, more preferably from 350 to <370 nm, very preferably from 355 to 368 nm, to avoid short UV light exposure in the PS-VA process.

Both using lower intensity and a UV shift to longer wavelengths protect the organic layer against damage that may be caused by the UV light.

A preferred embodiment of the present invention relates to a process for preparing a PSA display as described above and below, comprising one or more of the following features:

- the polymerizable LC medium is irradiated by UV light in a 2-step process, including a first UV exposure step ("UV1 step"), with application of a voltage, to generate the tilt angle, and a second UV exposure step ("UV2 step"), without application of a voltage, to complete polymerization,
- the polymerizable LC medium is irradiated by UV light generated by a UV lamp having an intensity of from 0.5 $mW/cm^2$ to 10 $mW/cm^2$ in the wavelength range from 300-380nm, preferably in the UV2 step, and optionally also in the UV1 step,
- the polymerizable LC medium is irradiated by UV light having a wavelength of ≥340 nm, and preferably ≤420 nm, very preferably in the range from 340 to 380nm, more preferably in the range from 350 to <370 nm, most preferably in the range from 355 to 368 nm,
- the polymerizable LC medium is irradiated by UV light while a voltage is applied to the electrodes of the display,
- irradiation by UV light is carried out using a UV-LED lamp.

This preferred process can be carried out for example by using the desired UV lamps or by using a band pass filter and/or a cut-off filter, which are substantially transmissive for UV light with the respective desired wavelength(s) and are substantially blocking light with the respective undesired wavelengths. For example, when irradiation with UV light of wavelengths λ of 300-400nm is desired, UV exposure can be carried out using a wide band pass filter being substantially transmissive for wavelengths 300nm < λ < 400nm. When irradiation with UV light of wavelength λ of more than 340 nm is desired, UV irradiation can be carried out using a cut-off filter being substantially transmissive for wavelengths λ > 340 nm.

Preferably UV irradiation is carried out using a UV-LED lamp.

The use of UV-LED lamps, which have with only one narrow emission peak, in the PSA process proivdes several advantages, like for example a more effective optical energy transfer to the polymerizable compounds in the LC medium, depending on the choice of the suitable polymerizable compounds that shows absorption at the emission wavelength of the LED lamp. This allows to reduce the UV intensity and/or the UV irradiation time, thus enabling a reduced tact time and savings in energy and production costs. Another advantage is that the narrow emission spectrum of the lamp allows an easier selection of the appropriate wavelength for photopolymerization.

Very preferably the UV light source is an UV-LED lamp emitting a wavelength in the range from 340 to 400 nm, more preferably in the range from 340 to 380 nm, more preferably in the range from 350 to <370 nm, most preferably in the range from 355 to 368 nm. UV-LED lamps emitting UV light with a wavelength of 365 nm are especially preferred.

Preferbaly the UV-LED lamp emits light having an emission peak with a full width half maximum (FWHM) of 30 nm or less.

UV-LED lamps are commercially available, for example from Dr. Hoenle AG, Germany or Primelite GmbH, Germany, or IST Metz GmbH, Germany, with emission wavelengths e.g. of 365, 385, 395 and 405 nm.

This preferred process enables the manufacture of displays by using longer UV wavelengths, thereby reducing or even avoiding the hazardous and damaging effects of short UV light components.

UV radiation energy is in general from 6 to 100 J, depending on the production process conditions.

The LC medium according to the present invention may additionally comprise one or more further components or additives, preferably selected from the list including but not limited to co-monomers, chiral dopants, polymerization initiators, inhibitors, stabilizers, surfactants, wetting agents, lubricating agents, dispersing agents, hydrophobing agents, adhesive agents, flow improvers, defoaming agents, deaerators, diluents, reactive diluents, auxiliaries, colourants, dyes, pigments and nanoparticles.

In another preferred embodiment the LC medium comprises, in addition to the polymerizable compounds of formula I or its subformulae, one or more further polymerizable compounds ("co-monomers"), preferably selected from RMs.

Suitable and preferred polymerizable compounds of use as comonomers are selected from the following formulae:

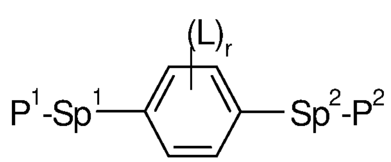

M1

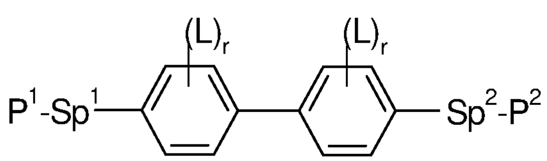

M2

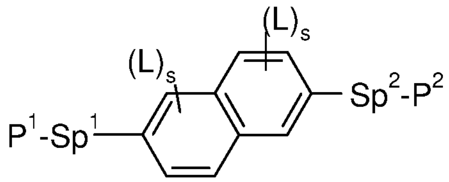

M3

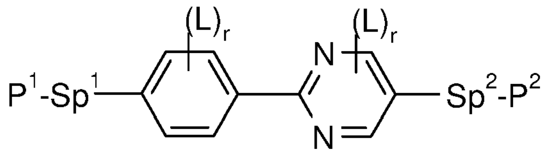

M4

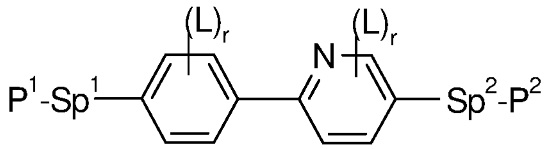

M5

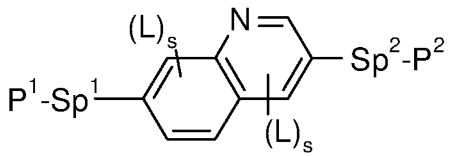

M6

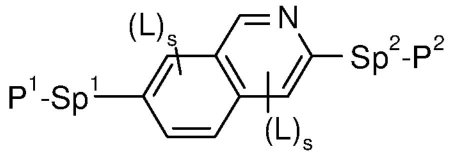

M7

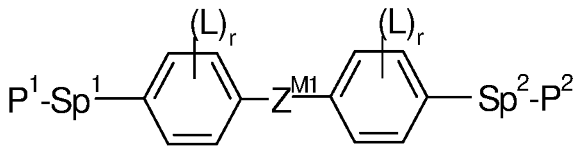

M8

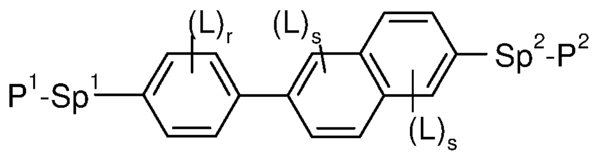

M9

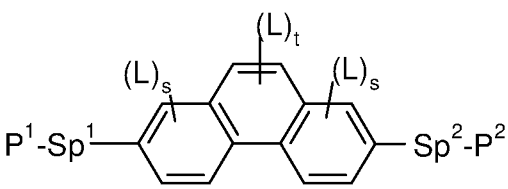

M10

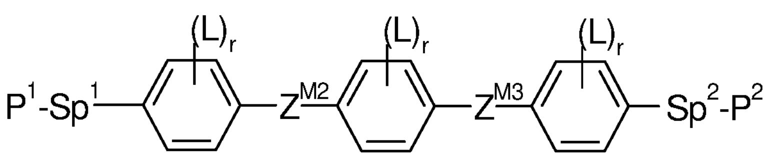

M11

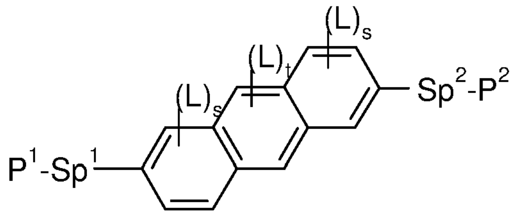

M12

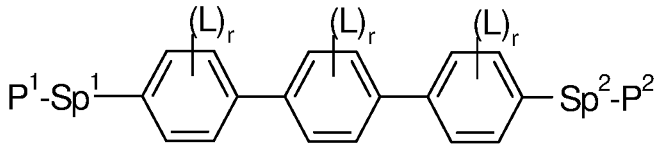

M13

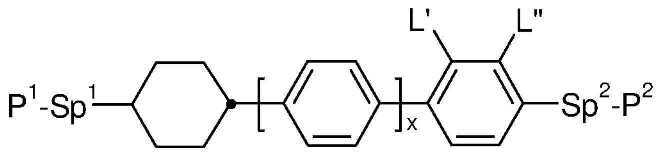

M14

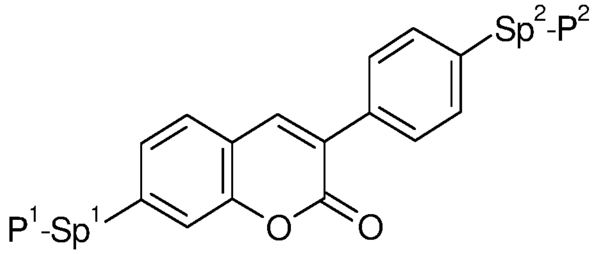

M15

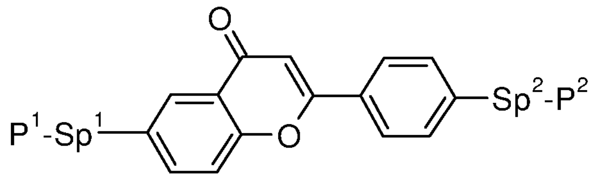

M16

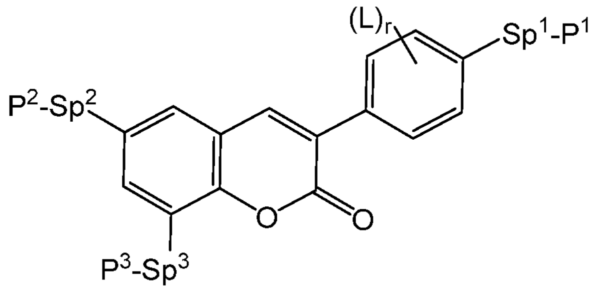

M17

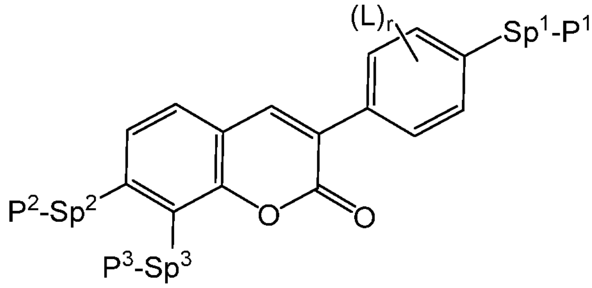

M18

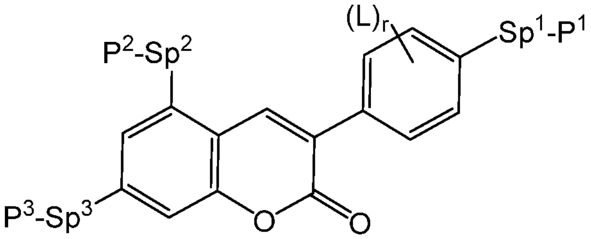

M19

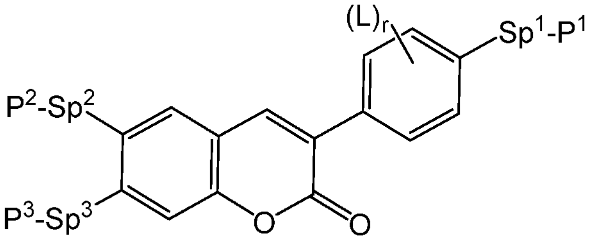

M20

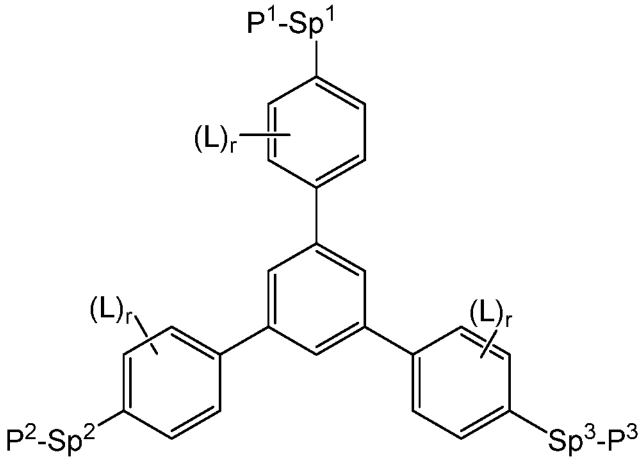

M21

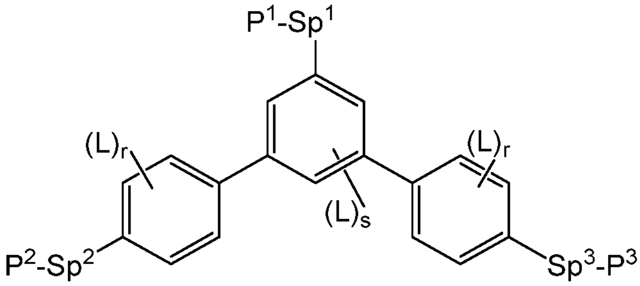

M22

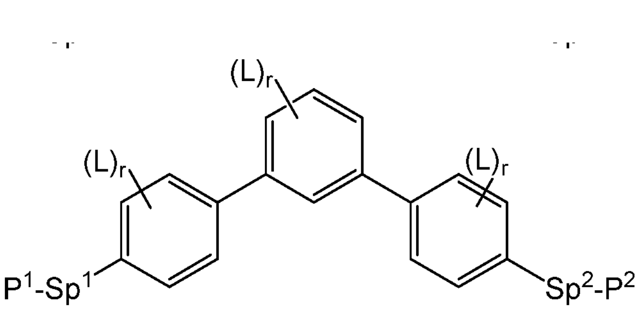

M23

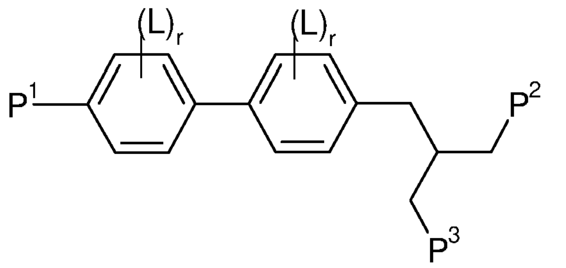

M24

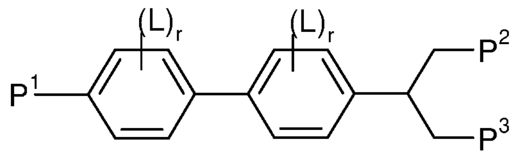

M25

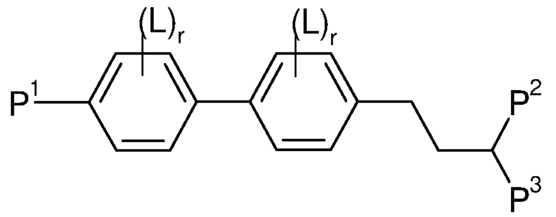

M26

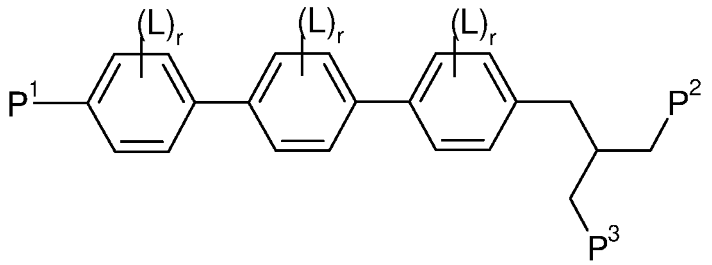

M27

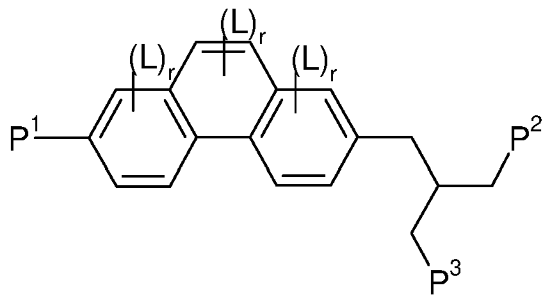

M28

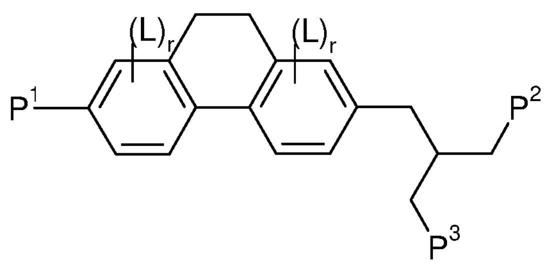

M29

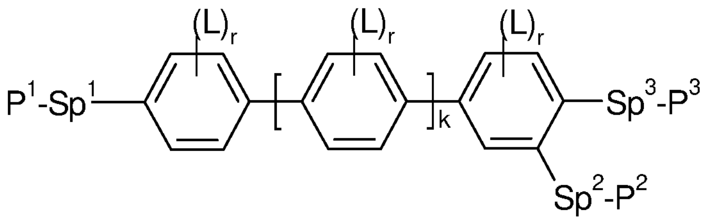

M30

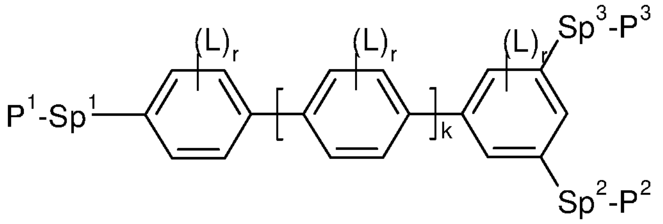

M31

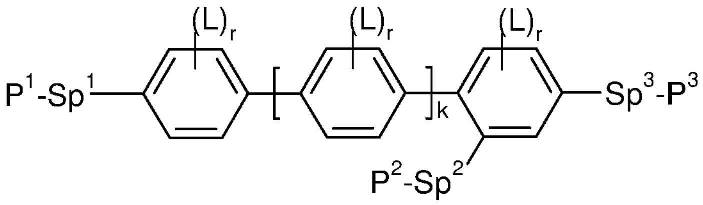

M32

in which the individual radicals, on each occurrence identically or differently, and each, independently of one another, have the following meaning:

$P^1$, $P^2$, $P^3$ a polymerizable group, preferably selected from vinyloxy, acrylate, methacrylate, fluoroacrylate, chloroacrylate, oxetane and epoxy,

$Sp^1$, $Sp^2$, $Sp^3$ a single bond or a spacer group where, in addition, one or more of the radicals $P^1$-$Sp^1$-, $P^1$-$Sp^2$- and $P^3$-$Sp^3$- may denote $R^{aa}$, with the proviso that at least one of the radicals $P^1$-$Sp^1$-, $P^2$-$Sp^2$ and $P^3$-$Sp^3$- present is different from $R^{aa}$, preferably $-(CH_2)_{p1}-$, $-(CH_2)_{p1}-O-$, $-(CH_2)_{p1}-CO-O-$or $-(CH_2)_{p1}-O-CO-O-$, wherein p1 is an integer from 1 to 12,

$R^{aa}$ H, F, Cl, CN or straight-chain or branched alkyl having 1 to 25 C atoms, in which, in addition, one or more non-adjacent $CH_2$ groups may each be replaced, independently of one another, by $-C(R^0)=C(R^{00})-$, -C=C-, -N(R°)-,-O-, -S-, -CO-, -CO-O-, -O-CO-, -O-CO-O- in such a way that O and/or S atoms are not linked directly to one another, and in which, in addition, one or more H atoms may be replaced by F, Cl, CN or $P^1$-$Sp^1$-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms), and wherein $R^{aa}$ does not denote or contain a group $P^1$, $P^2$ or $P^3$,

R°, $R^{00}$ H or alkyl having 1 to 12 C atoms,

$R^y$ and $R^z$ H, F, $CH_3$ or $CF_3$,

$X^1$, $X^2$, $X^3$ -CO-O-, -O-CO- or a single bond,

$Z^{M1}$ -O-, -CO-, $-C(R^yR^z)-$ or $-CF_2CF_2-$,

$Z^{M2}$, $Z^{M3}$ -CO-O-, -O-CO-, $-CH_2O-$, $-OCH_2-$, $-CF_2O-$, $-OCF_2-$ or $-(CH_2)_n-$, where n is 2, 3 or 4,

L F, Cl, CN or straight-chain or branched, optionally mono- or polyfluorinated alkyl, alkoxy, alkenyl,

alkynyl, alkylcarbonyl, alkoxycarbonyl, alkylcarbonyloxy or alkoxycarbonyloxy having 1 to 12 C atoms,

| | |
|---|---|
| L', L" | H, F or Cl, |
| k | 0 or 1, |
| r | 0, 1, 2, 3 or 4, |
| s | 0, 1, 2 or 3, |
| t | 0, 1 or 2, |
| x | 0 or 1. |

Very preferred are compounds of formulae M2 and M13, especially direactive compounds containing exactly two polymerizable groups $P^1$ and $P^2$.

Further preferred are compounds selected from formulae M17 to M32, in particular from formulae M20, M22, M24, M27, M30 and M32, especially trireactive compounds containing exactly three polymerizable groups $P^1$, $P^2$ and $P^3$.

In the compounds of formulae M1 to M32 the group

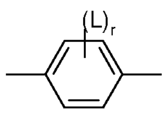

is preferably

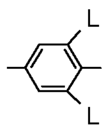 , 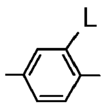 , 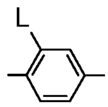 ,

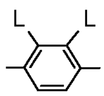 , 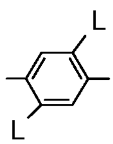 or 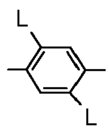 ,

wherein L on each occurrence, identically or differently, has one of the meanings given above or below, and is preferably F, Cl, CN, $NO_2$, $CH_3$, $C_2H_5$, $C(CH_3)_3$, $CH(CH_3)_2$, $CH_2CH(CH_3)C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$ or P-Sp-, very preferably F, Cl, CN, $CH_3$, $C_2H_5$, $OCH_3$, $COCH_3$, $OCF_3$ or P-Sp-, more preferably F, Cl, $CH_3$, $OCH_3$, $COCH_3$ or $OCF_3$, most preferably F or $OCH_3$.

Preferred compounds of formulae M1 to M32 are those wherein $P^1$, $P^2$ and $P^3$ denote an acrylate, methacrylate, oxetane or epoxy group, very preferably an acrylate or methacrylate group, most preferably a methacrylate group.

Further preferred compounds of formulae M1 to M32 are those wherein $Sp^1$, $Sp^2$ and $Sp^3$ are a single bond.

Further preferred compounds of formulae M1 to M32 are those wherein one of $Sp^1$, $Sp^2$ and $Sp^3$ is a single bond and another one of $Sp^1$, $Sp^2$ and $Sp^3$ is different from a single bond.

Further preferred compounds of formulae M1 to M32 are those wherein those groups $Sp^1$, $Sp^2$ and $Sp^3$ that are different from a single bond denote $-(CH_2)_{s1}$-X"-, wherein s1 is an integer from 1 to 6, preferably 2, 3, 4 or 5, and X" is X" is the linkage to the benzene ring and is -O-, -O-CO-, -CO-O, -O-CO-O- or a single bond.

Further preferred compounds of formula M are those selected from Table D below, especially those selected from the group consisting of formulae RM-1, RM-4, RM-8, RM-17, RM-19, RM-35, RM-37, RM-39, RM-40, RM-41, RM-48, RM-52, RM-54, RM-57, RM-64, RM-74, RM-76, RM-88, RM-92, RM-102, RM-103, RM-109, RM-116, RM-117, RM-120, RM-121, RM-122, RM-139, RM-142, RM-153, RM-155, RM-158 and RM-159.

Particularly preferred are LC media comprising one, two or three polymerizable compounds of formula M.

Further preferred are LC media comprising two or more direactive polymerizable compounds of formula M, preferably selected from formulae M1 to M16, very preferably selected from formulae M2 and M13.

Further preferred are LC media comprising one or more direactive polymerizable compounds of formula M,

preferably selected from formulae M1 to M16, very preferably from formulae M2 and M13, and one or more trireactive polymerizable compounds of formula M, preferably selected from formulae M17 to M32, very preferably from formulae M20, M22, M24, M27, M30 and M32.

Further preferred are LC media comprising one or more polymerizable compounds of formula M wherein at least one r is not 0, or at least one of s and t is not 0, very preferably selected from formulae M2, M13, M22, M24, M27, M30 and M32, and wherein L is selected from the preferred groups shown above, most preferably from F and $OCH_3$.

Further preferred are LC media comprising one or more polymerizable compounds which show absorption in the wavelength range from 320 to 380nm, preferably selected from formula M, very preferably from formulae M1 to M32.

Further preferred are LC media comprising one or more polymerizable compounds selected from Table D. Of these, compounds RM-1, RM-4, RM-8, RM-17, RM-19, RM-35, RM-37, RM-39, RM-40, RM-41, RM-48, RM-52, RM-54, RM-57, RM-64, RM-74, RM-76, RM-88, RM-102, RM-103, RM-109, RM-117, RM-120, RM-121, RM-122 and RM-145 to RM-152 are particularly preferred.

In another preferred embodiment the LC medium comprises, in addition to the polymerizable compounds of formula I or its subformulae, one or more polymerizable compounds having two polymerizable groups which are selected from formula CM

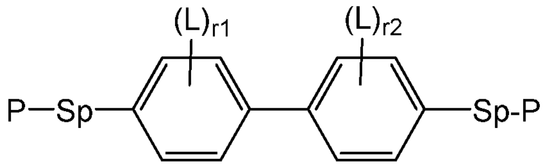

CM

in which the individual radicals, on each occurrence identically or differently, and each, independently of one another, have the following meaning:

P, Sp one of the meanings given in formula I or its subformulae or one of their preferred meanings as given above and below,

L F, Cl, CN or straight-chain or branched, optionally mono- or poly-fluorinated alkyl, alkoxy, alkenyl, alkynyl, alkylcarbonyl, alkoxycarbonyl, alkylcarbonyloxy or alkoxycarbonyloxy having 1 to 12 C atoms,

r1, r2 0, 1, 2, 3 or 4, preferably 0, 1 or 2, very preferably 0 or 1.

Preferred compounds of formula CM are selected from the following subformulae

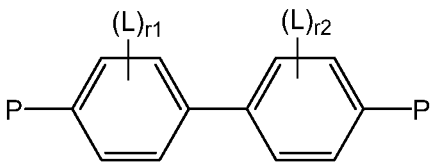

CM-1

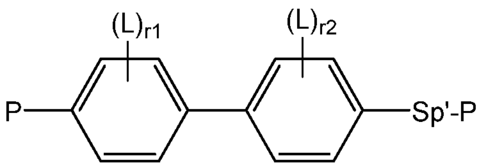

CM-2

wherein P and Sp, L, r1 and r2 have independently of each other one of the meanings given in formula CM or one of their preferred meanings as given above and below, and Sp' has one of the meanings given for Sp that is different from a single bond.

Preferably at least one of r1 and r2 is not 0.

P is preferably acrylate or methacrylate, very preferably methacrylate. Preferably all groups P in the formulae CM, CM-1 and CM-2 have the same meaning, and very preferably denote methacrylate. Sp' is preferably selected from $-(CH_2)_2-$, $-(CH_2)_3-$, $-(CH_2)_4-$, $-O-(CH_2)_2-$, $-O-(CH_2)_3-$, $-O-CO-(CH_2)_2$ and $-CO-O-(CH)_2-$, wherein the O atom or the CO group is attached to the benzene ring.

L is preferably selected from F, $CH_3$, $OCH_3$, $OC_2H_5$, $C_2H_5$, $CH=CH_2$ and $C(CH_3)=CH_2$, very preferably from F.

Very preferred are the compounds of formula CM-1.

More preferred compounds of formula CM are selected from the following subformulae

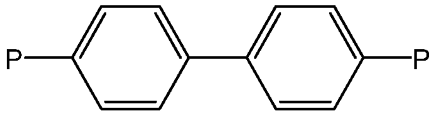

CM-1-1

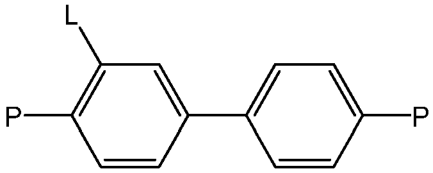

CM-1-2

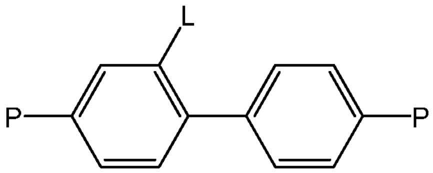

CM-1-3

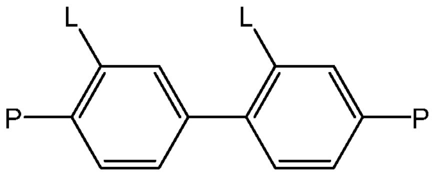

CM-1-4

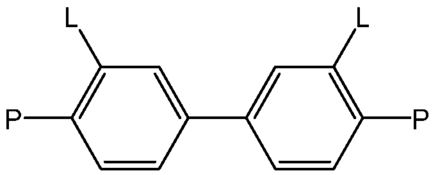

CM-1-5

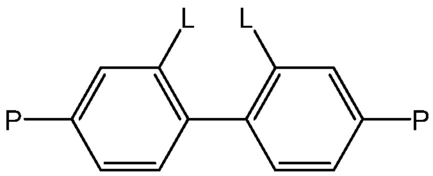

CM-1-6

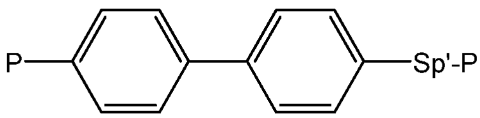

CM-2-1

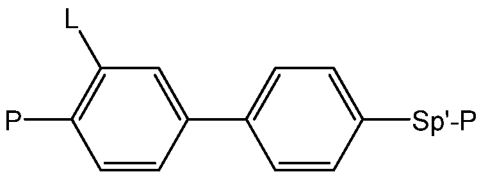

CM-2-2

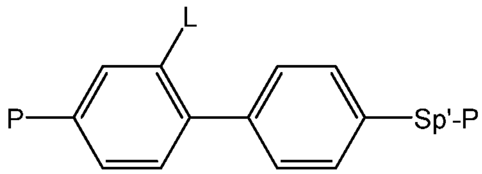

CM-2-3

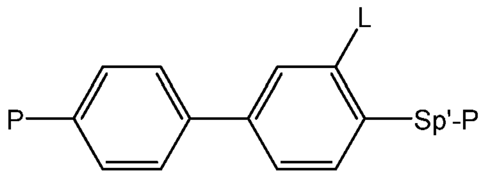

CM-2-4

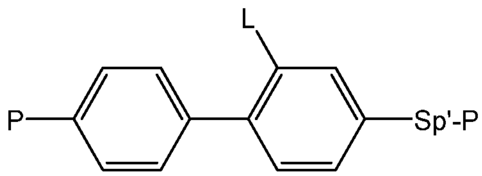

CM-2-5

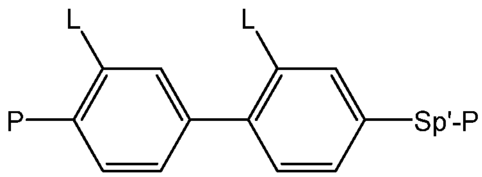

CM-2-6

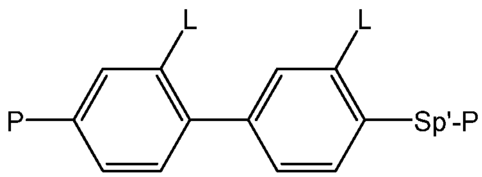

CM-2-7

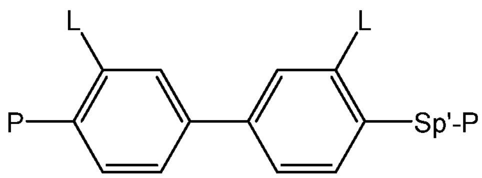

CM-2-8

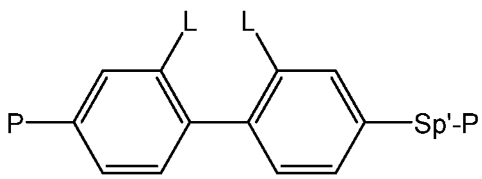

CM-2-9

wherein P, Sp' and L have one of the meanings as given in formula CM-1 and CM-2. P is preferably acrylate or methacrylate, very preferably methacrylate. Preferably all groups P in the formulae CM-1-1 to CM-2-9 have the same meaning, and very preferably denote methacrylate. Sp' is preferably selected from $-(CH_2)_2-$, $-(CH_2)_3-$, $-(CH_2)_4-$, $-O-(CH_2)_2-$, $-O-(CH_2)_3-$, $-O-CO-(CH_2)_2$ and $-CO-O-(CH)_2-$, wherein the O atom or the CO group is attached to the benzene ring. L is preferably selected from F, $CH_3$, $OCH_3$, $OC_2H_5$, $C_2H_5$, $CH=CH_2$ and $C(CH_3)=CH_2$, very preferably from F and $OCH_3$.

Very preferred are the compounds of formula CM-1-2, CM-1-3, CM-1-4, CM-1-5, CM-1-6 and their subformulae. Most preferred are the compounds of formula CM-1-1 .

Very preferred compounds of formula CM are selected from the following subformulae:

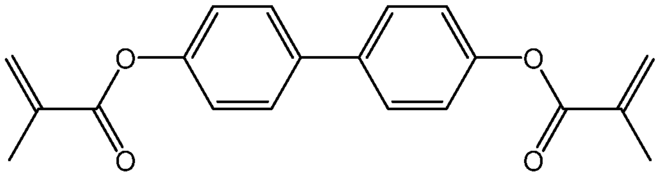

CM-1-1a

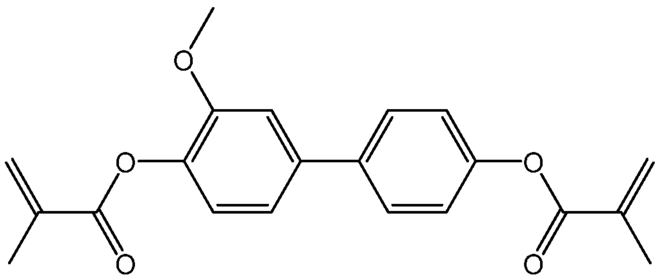

CM-1-2a

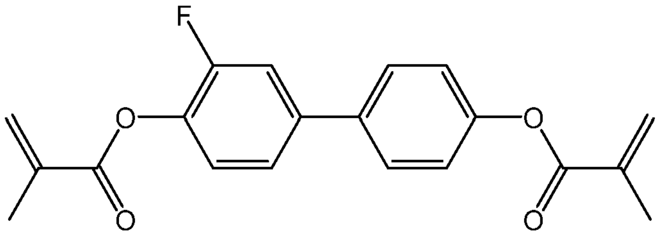

CM-1-2b

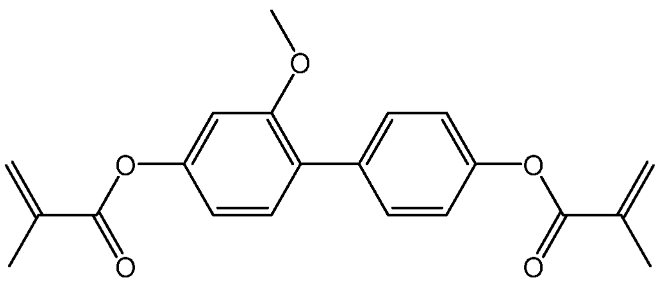

CM-1-3a

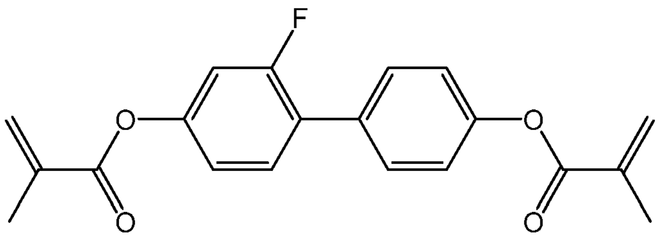

CM-1-3b

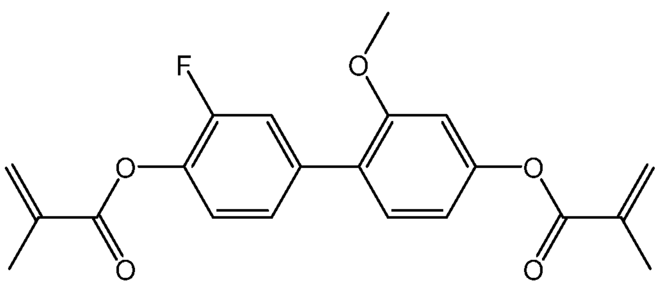

CM-1-4a

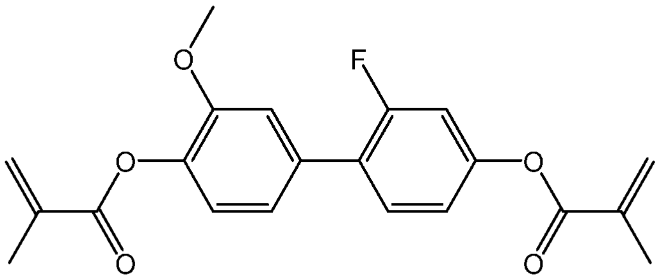

CM-1-4b

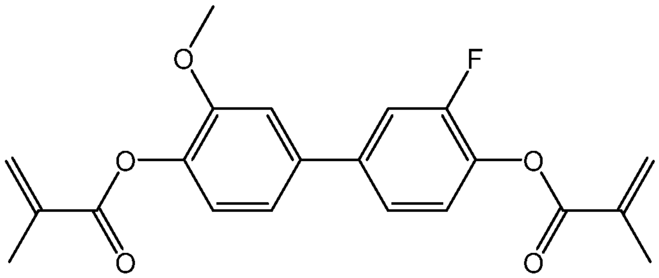

CM-1-5a

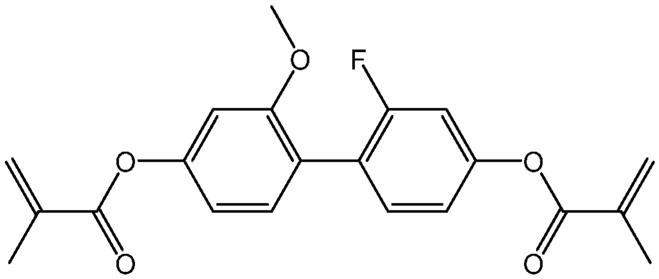

CM-1-6a

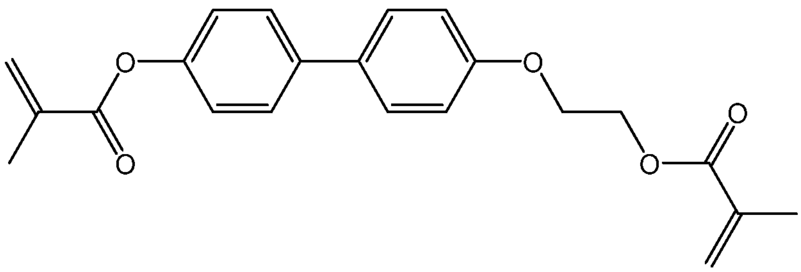

CM-2-1a

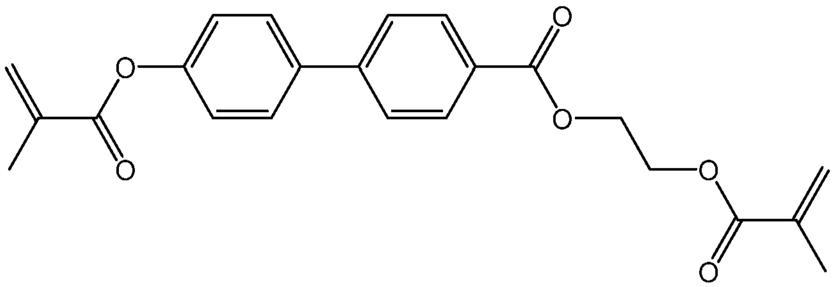

CM-2-1b

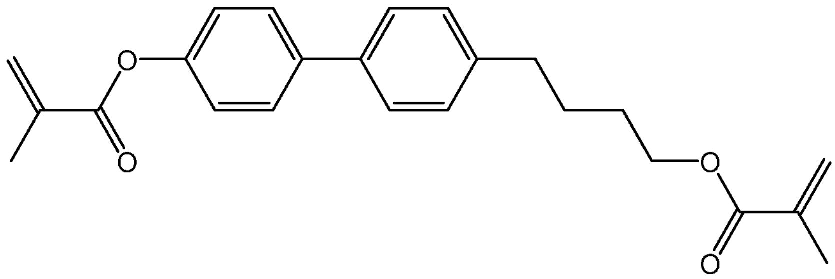

CM-2-1c

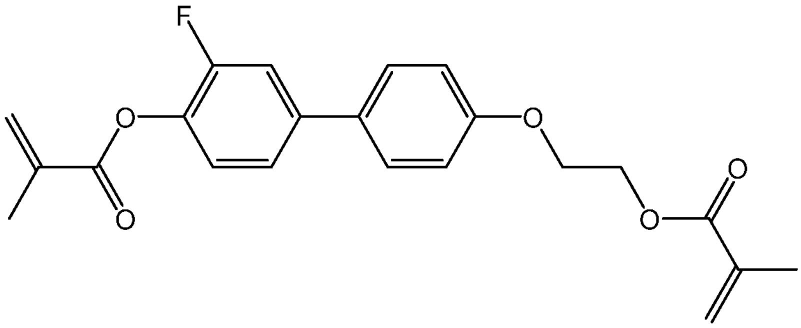

CM-2-2a

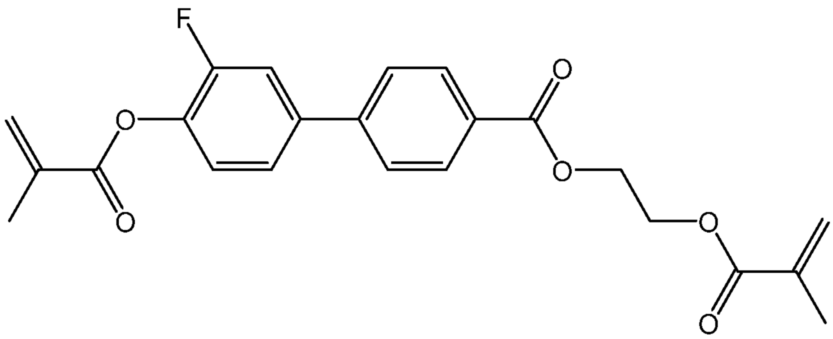

CM-2-2b

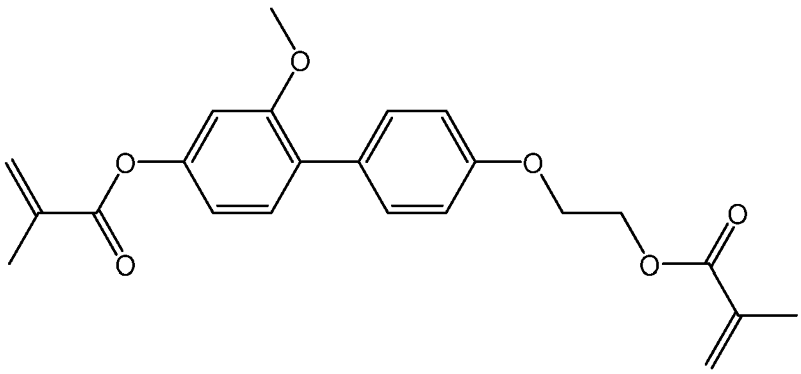

CM-2-3a

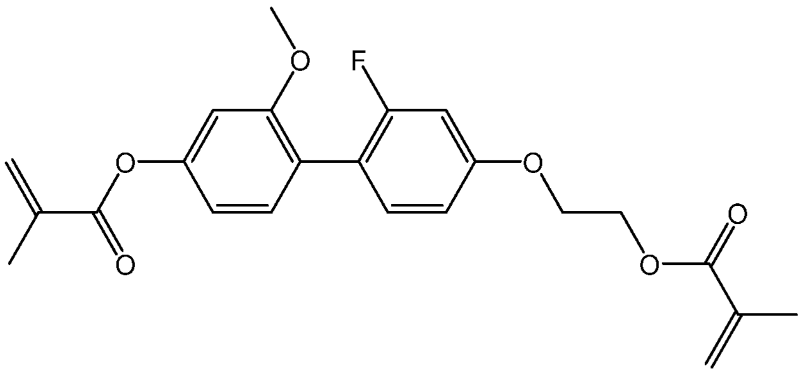

CM-2-9a

Very preferred are the compounds of formula CM-1-1a, CM-1-2a and CM-1-3a. Most preferred are the compounds of formula CM-1-1a.

Further preferred are the compounds of formulae CM-1-1a to CM-2-9a wherein one or two of the methacrylate groups are replaced by acrylate groups, and the compounds of formulae CM-1-1a to CM-2-9a wherein all methacrylate groups are replaced by acrylate groups.

Further preferred compounds of formula CM are selected from Table D below.

In another preferred embodiment the LC medium comprises, in addition to the polymerizable compounds of formula I or its subformulae, one or more polymerizable compounds having three polymerizable groups which are selected from formula MT

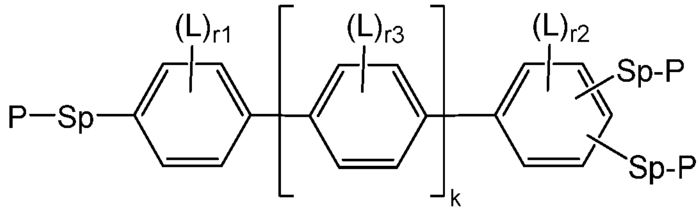

MT

wherein P, Sp, L, r1 and r2 independently of each other have the meanings given in formula CM or one of their preferred meanings as given above and below, k is 0 or 1, and r3 is 0, 1, 2, 3 or 4, preferably 0, 1 or 2, very preferably 0 or 1.

Preferred compounds of formula MT are selected from the following subformulae

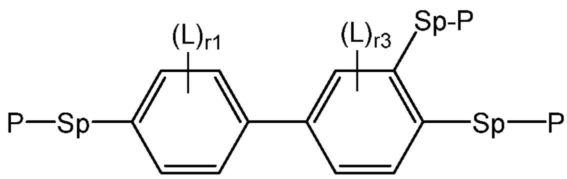

MT-1

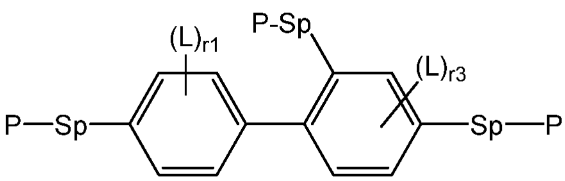

MT-2

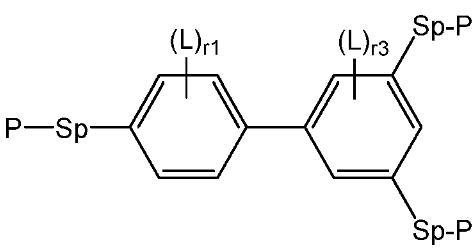

MT-3

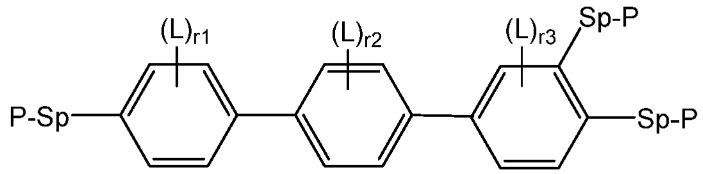

MT-4

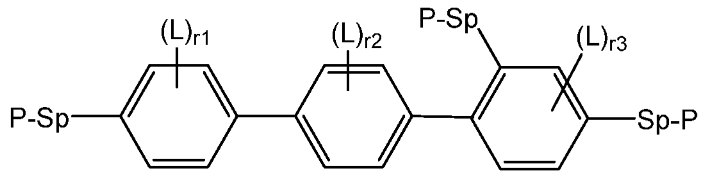

MT-5

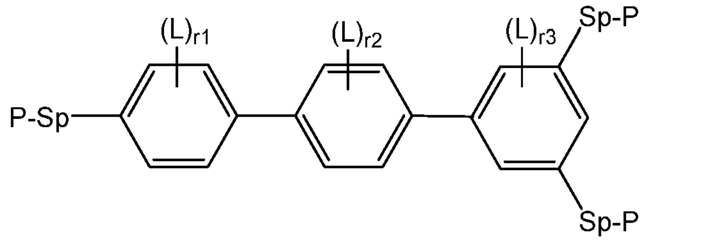

MT-6

wherein P, Sp, L, r1, r2 and r3 have independently of each other one of the meanings given in formula MT or one of their preferred meanings as given above and below.

Preferably at least one of r1, r2 and r3 is not 0.

P is preferably acrylate or methacrylate, very preferably methacrylate.

L is preferably selected from F, $CH_3$, $OCH_3$, $OC_2H_5$, $C_2H_5$, $CH=CH_2$ and $C(CH_3)=CH_2$, very preferably from F.

Preferably all groups P in the formulae MT and MT-1 to MT-6 have the same meaning, and very preferably denote methacrylate.

Very preferred are the compounds of formula MT-1, MT-4 and MT-5.

More preferred compounds of formula NM are selected from the following subformulae

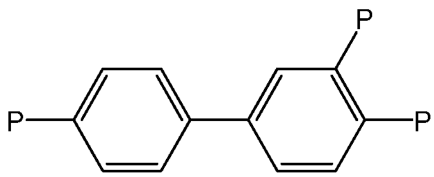

MT-1-1

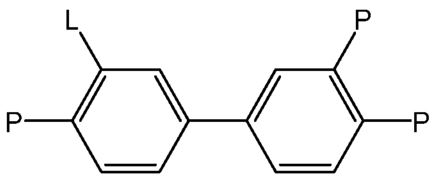

MT-1-2

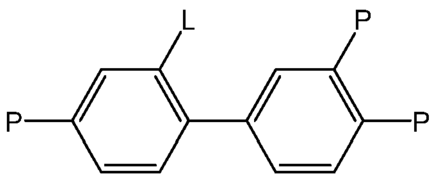

MT-1-3

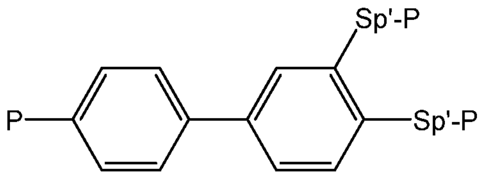

MT-1-4

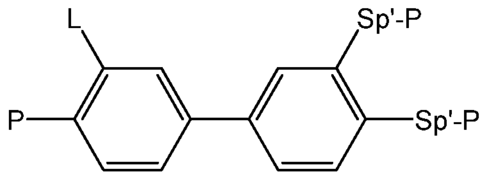

MT-1-5

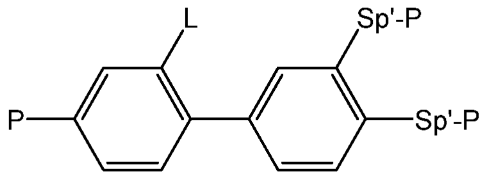

MT-1-6

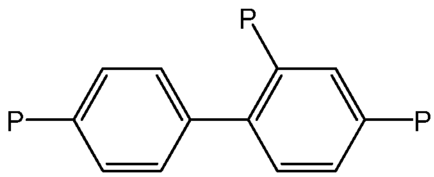

MT-2-1

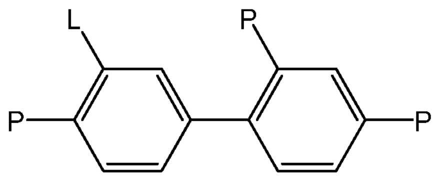

MT-2-2

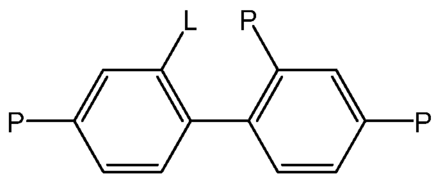

MT-2-3

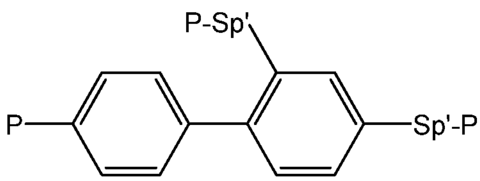

MT-2-4

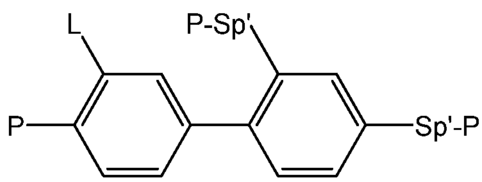

MT-2-5

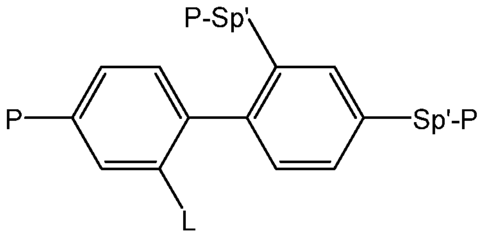

MT-2-6

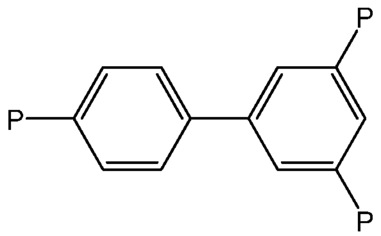

MT-3-1

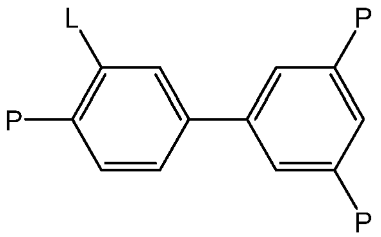

MT-3-2

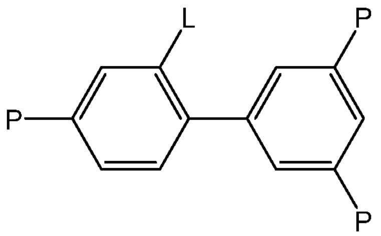

MT-3-3

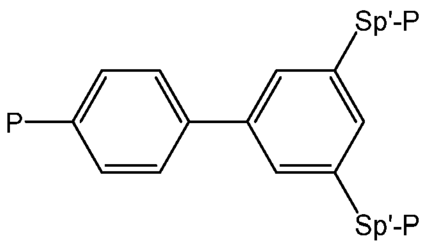

MT-3-4

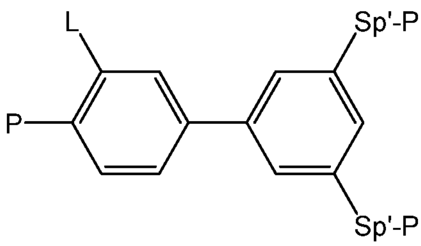

MT-3-5

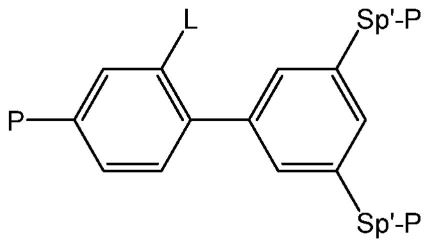

MT-3-6

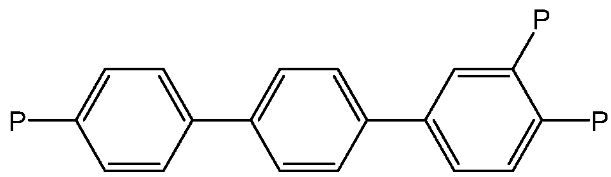

MT-4-1

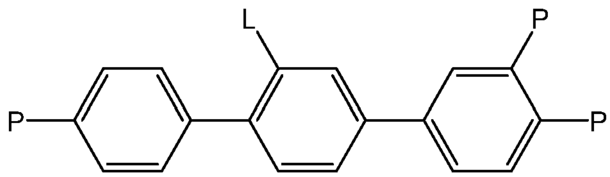

MT-4-2

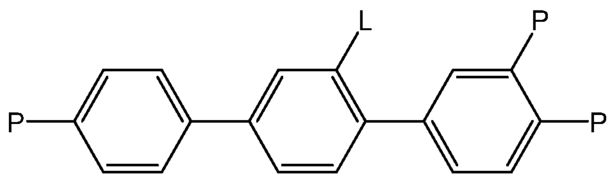

MT-4-3

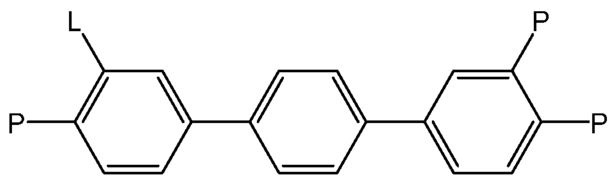

MT-4-4

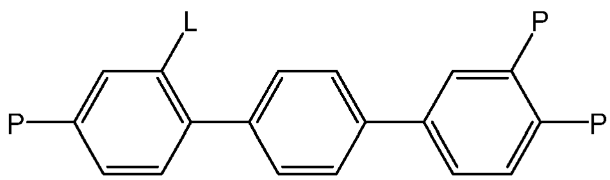

MT-4-5

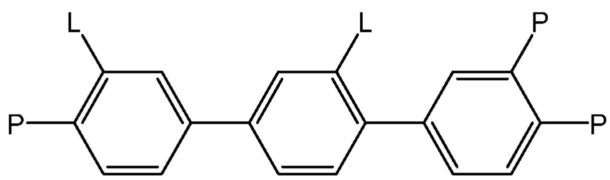

MT-4-6

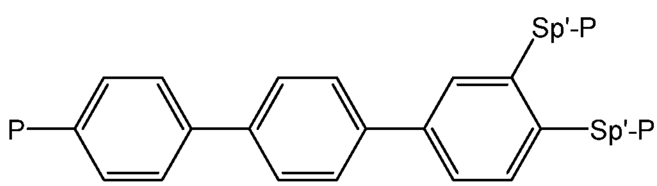

MT-4-7

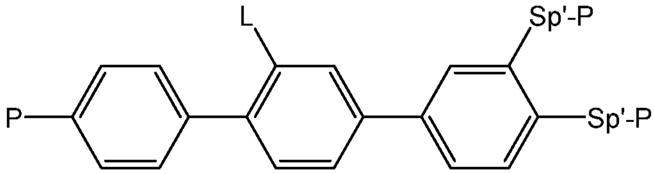

MT-4-8

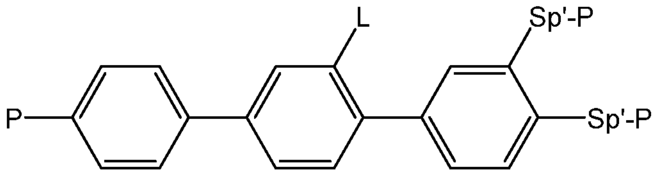

MT-4-9

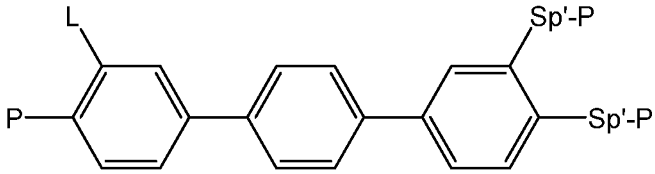

MT-4-10

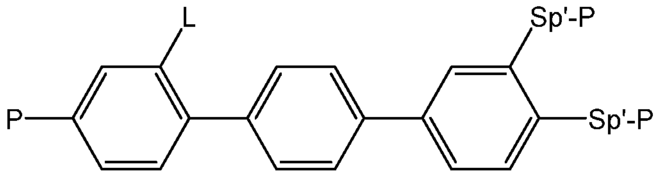

MT-4-11

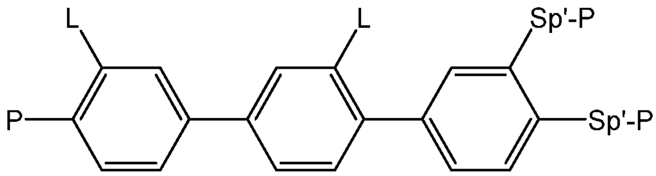

MT-4-12

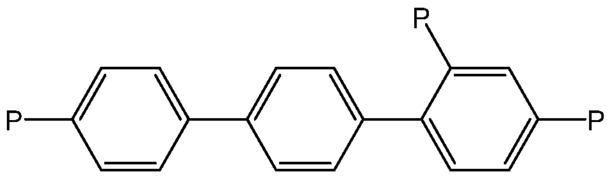

MT-5-1

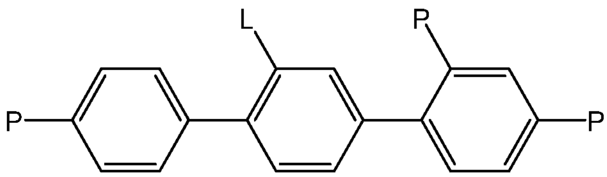

MT-5-2

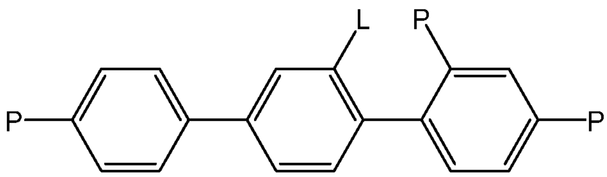

MT-5-3

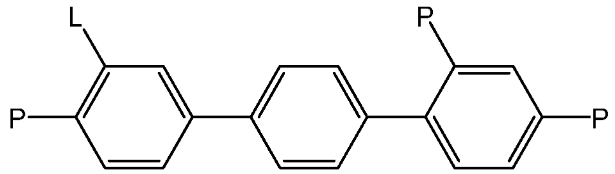

MT-5-4

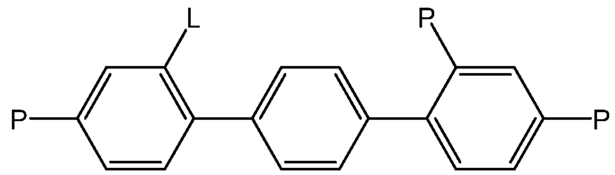

MT-5-5

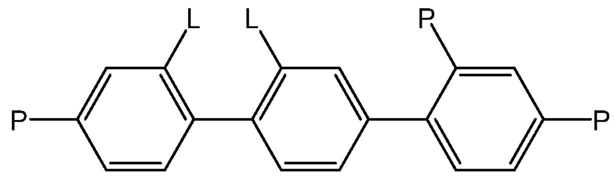

MT-5-6

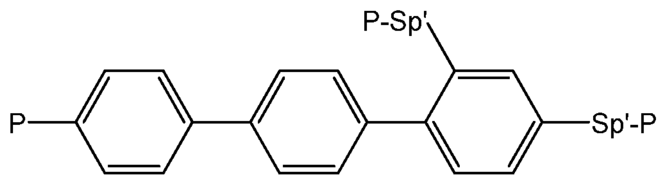

MT-5-7

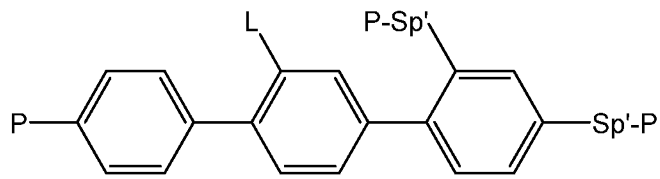

MT-5-8

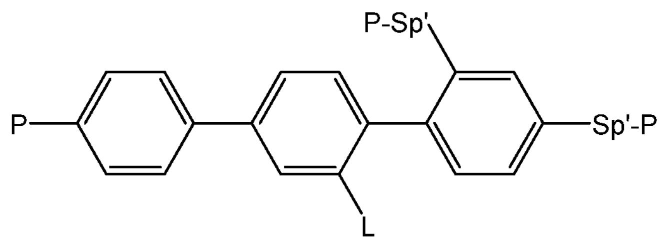

MT-5-9

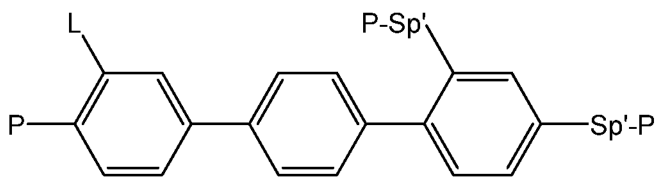

MT-5-10

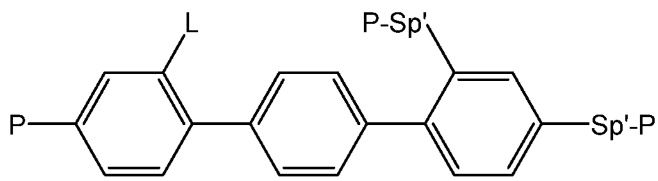

MT-5-11

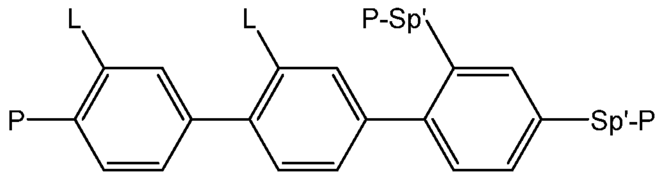

MT-5-12

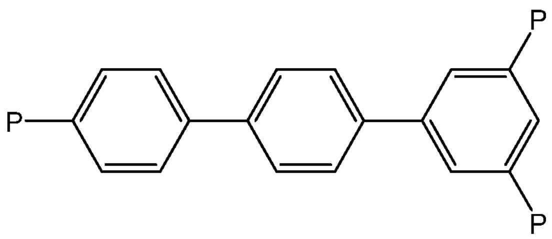

MT-6-1

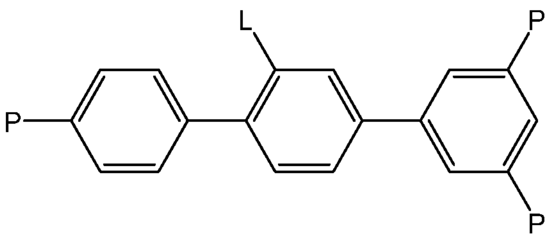

MT-6-2

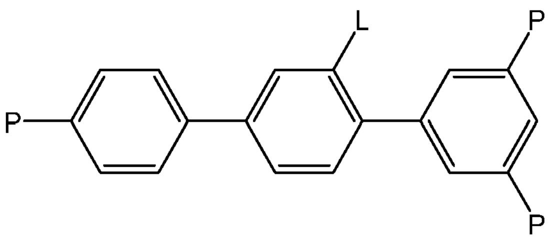

MT-6-3

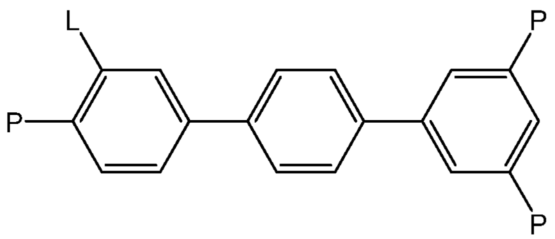

MT-6-4

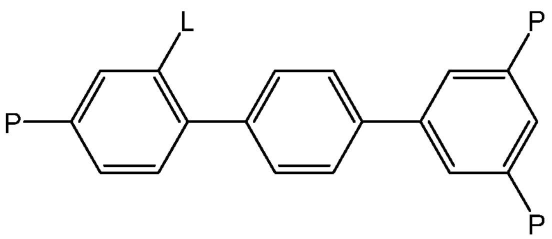

MT-6-5

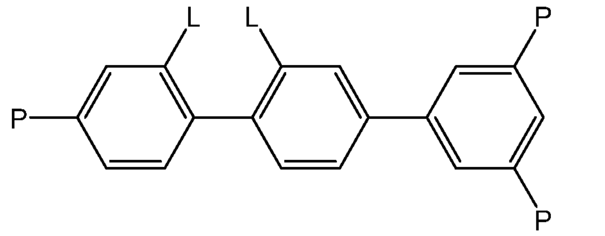

MT-6-6

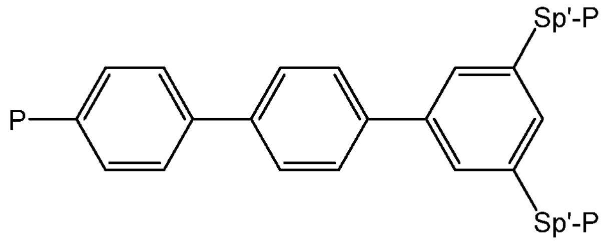

MT-6-7

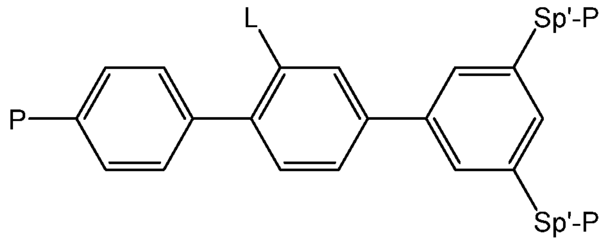

MT-6-8

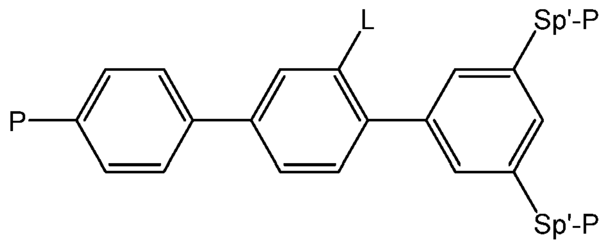

MT-6-9

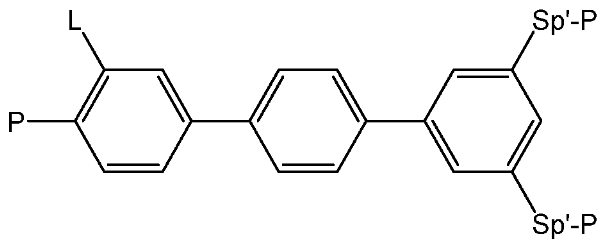

MT-6-10

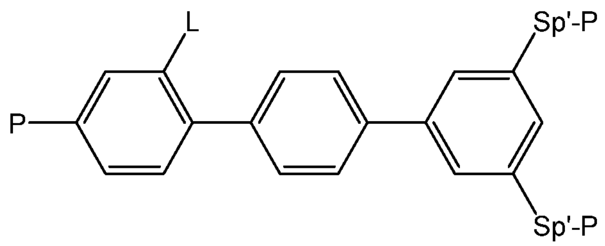

MT-6-11

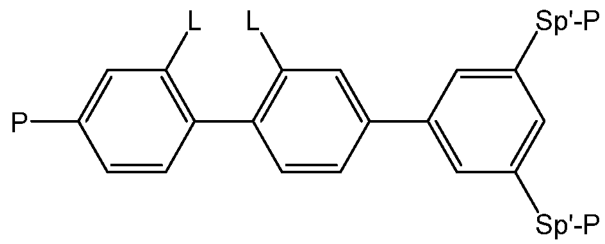

MT-6-12

wherein P, Sp and L have one of the meanings as given in formula MT and Sp' has one of the meanings given for Sp that is different from a single bond. P is preferably acrylate or methacrylate, very preferably methacrylate. Preferably all groups P in the formulae MT-1-1 to MT-6-12 have the same meaning, and very preferably denote methacrylate. Sp' is preferably selected from $-(CH_2)_2-$, $-(CH_2)_3-$, $-(CH_2)_4-$, $-O-(CH_2)_2-$, $-O-(CH_2)_3-$, $-O-CO-(CH_2)_2$ and $-CO-O-(CH)_2-$, wherein the O atom or the CO group is attached to the benzene ring. L is preferably selected from F, $CH_3$, $OCH_3$, $OC_2H_5$, $C_2H_5$, $CH=CH_2$ and $C(CH_3)=CH_2$, very preferably from F and $OCH_3$.

Very preferred are the compounds of formula MT-1 -1, MT-1 -6, MT-5-1 and their subformulae.

Very preferred compounds of formula MT are selected from the following subformulae:

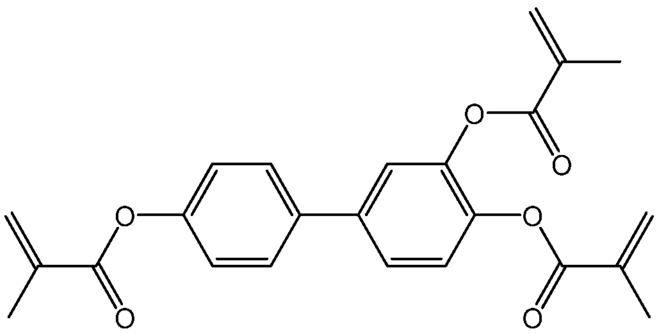

MT-1-1a

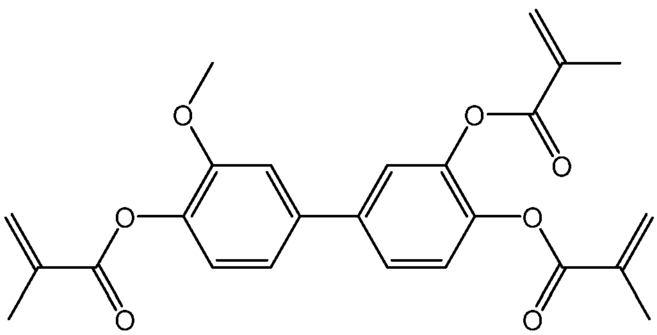

MT-1-2a

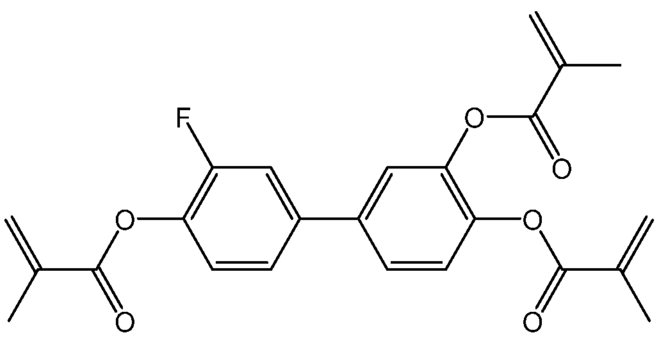

MT-1-2b

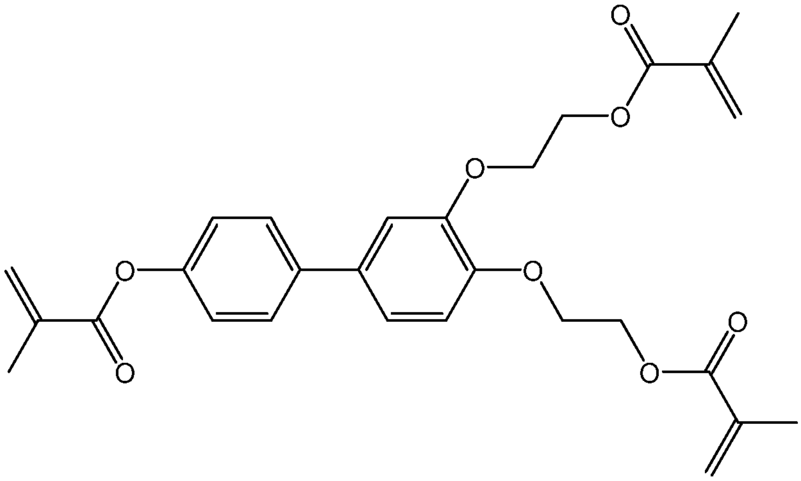

MT-1-4a

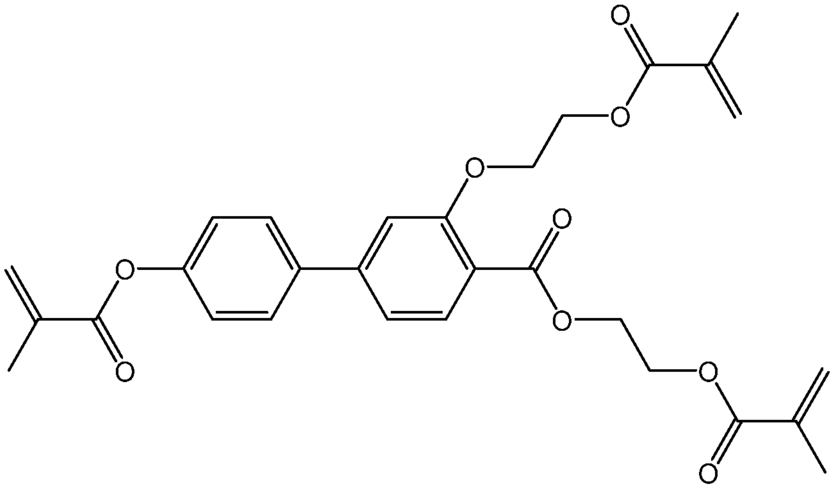

MT-1-4b

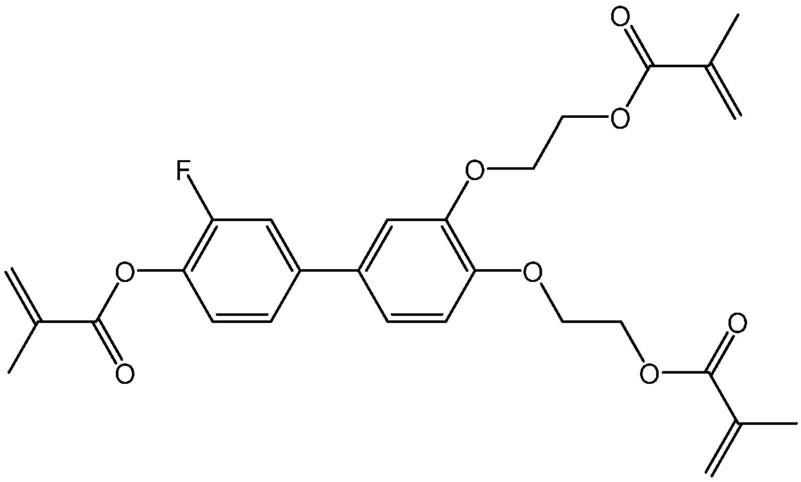

MT-1-5a

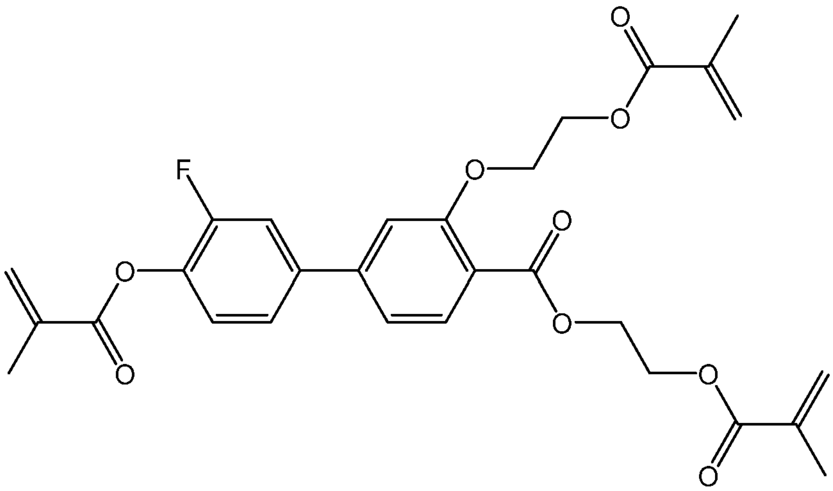

MT-1-5b

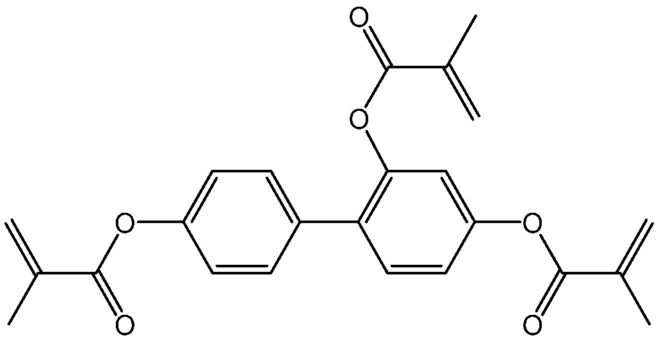

MT-2-1a

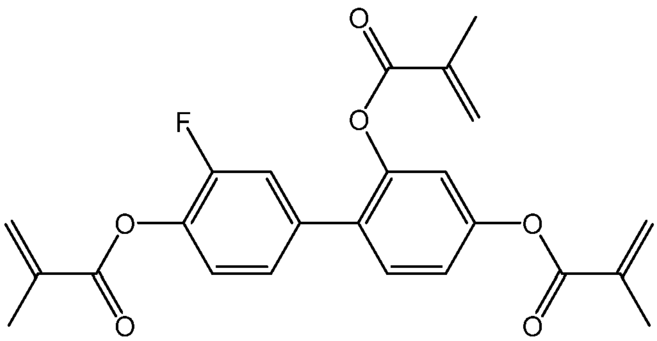

MT-2-2a

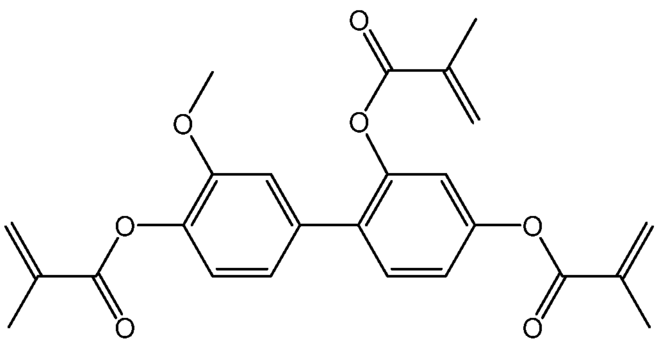

MT-2-2b

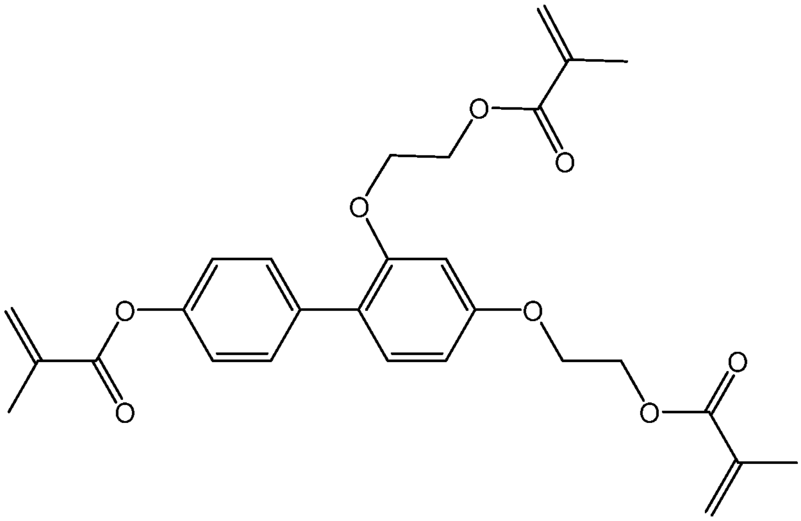

MT-2-4a

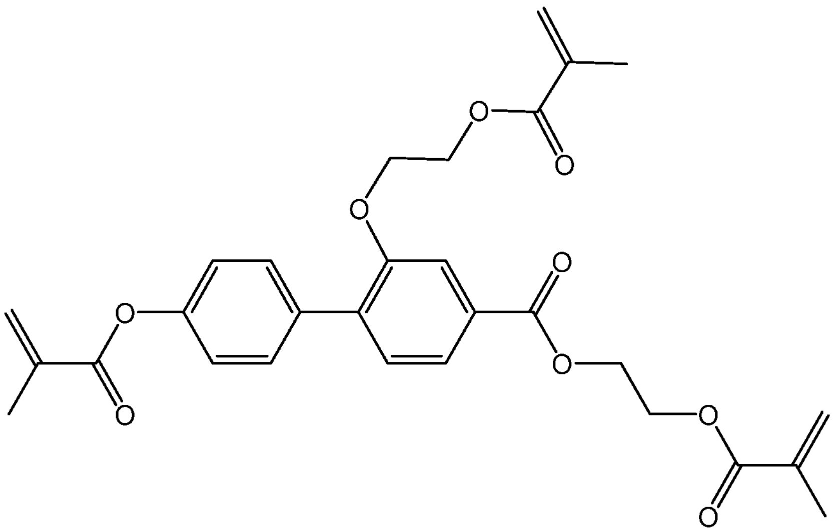

MT-2-4b

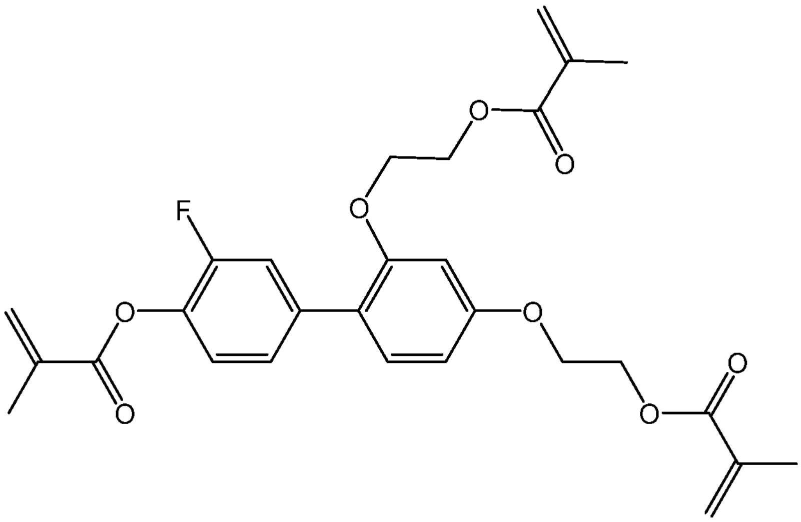

MT-2-5a

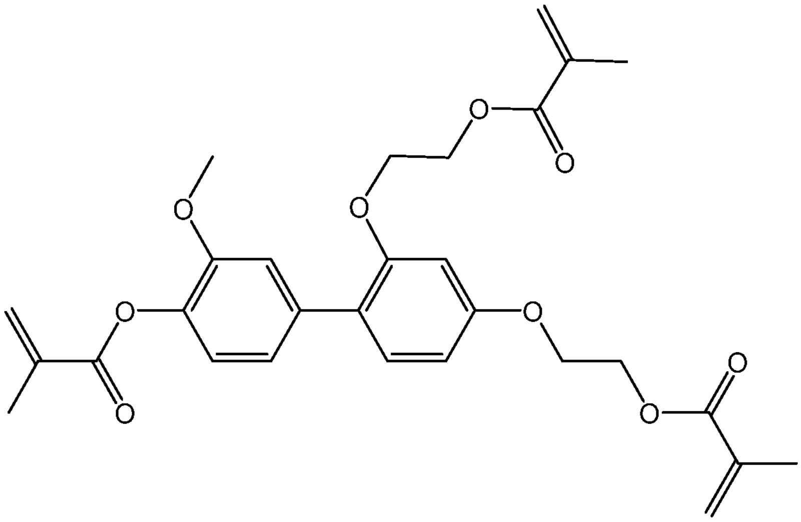

MT-2-5b

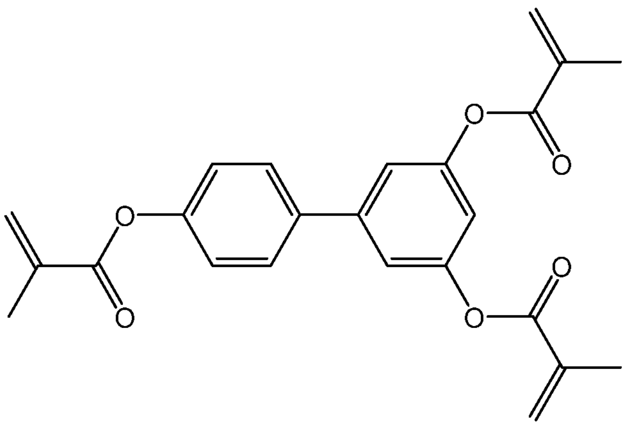

MT-3-1a

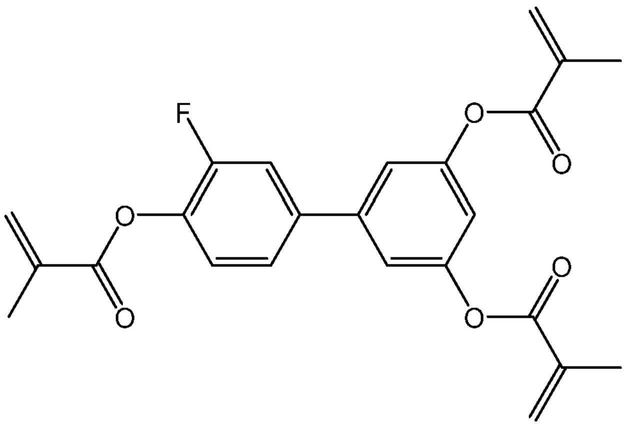

MT-3-2a

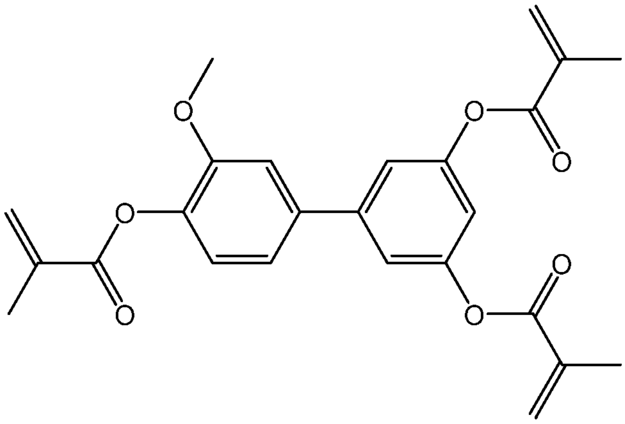

MT-3-2b

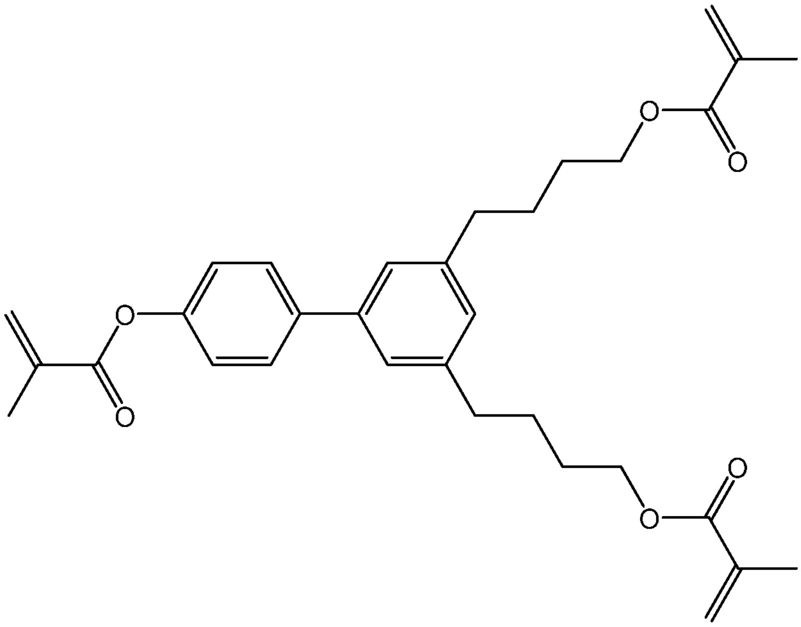

MT-3-4a

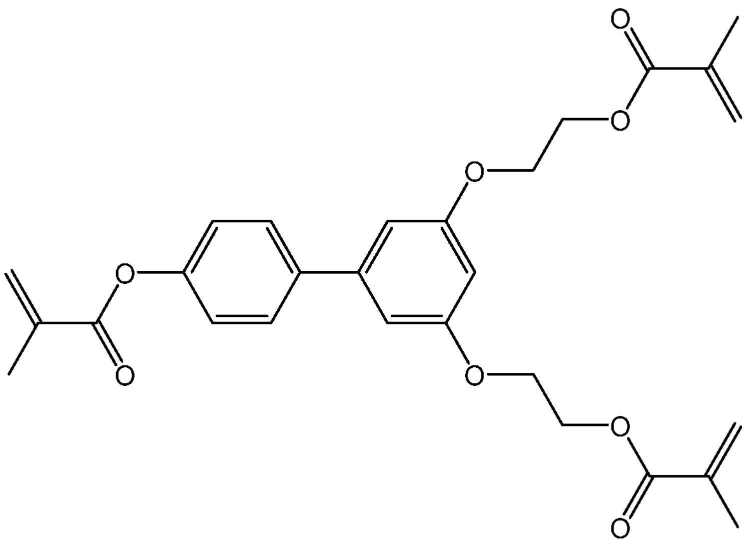

MT-3-4b

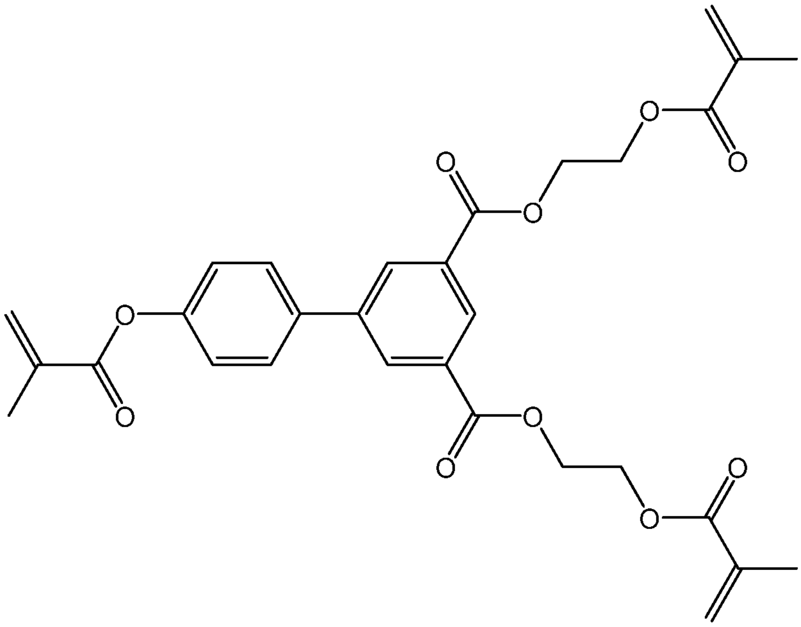

MT-3-4c

MT-3-5a

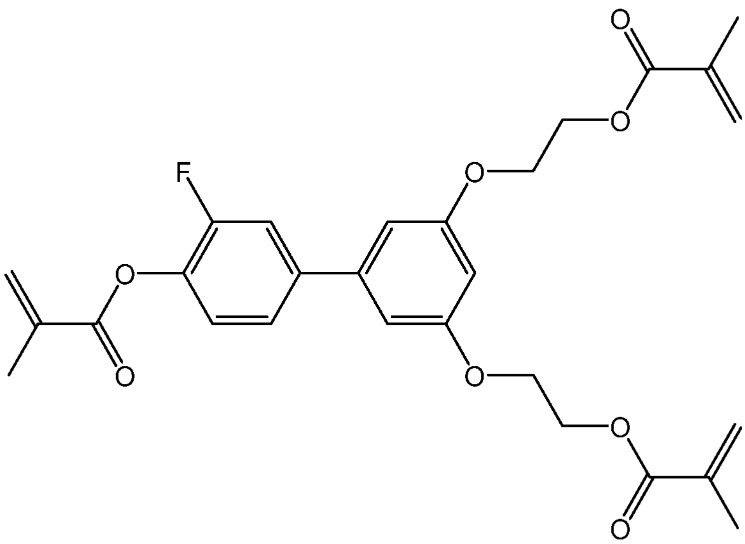

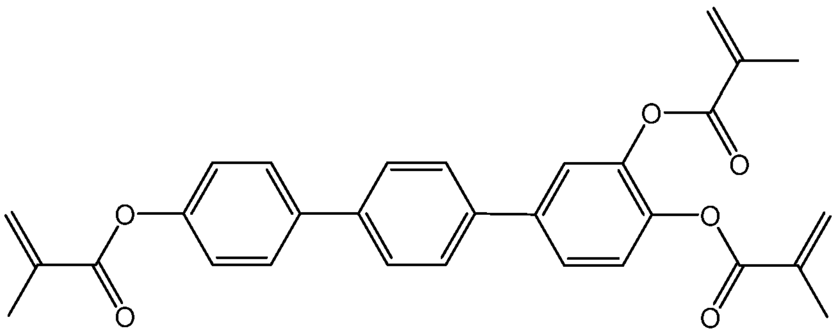

MT-4-1a

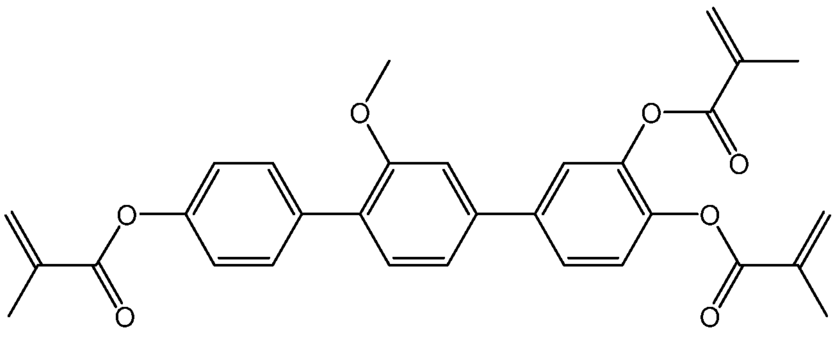

MT-4-2a

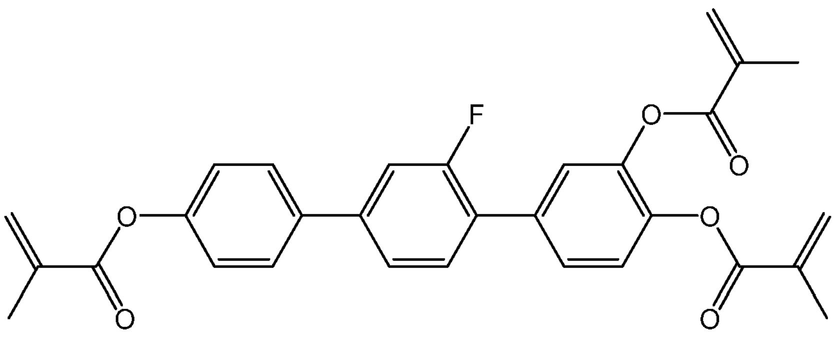

MT-4-3a

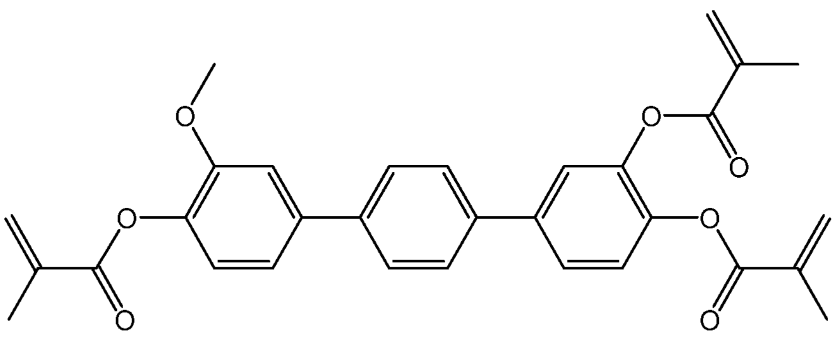

MT-4-4a

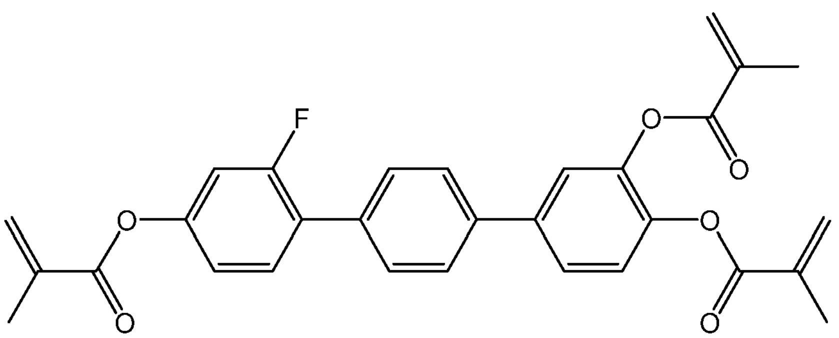

MT-4-5a

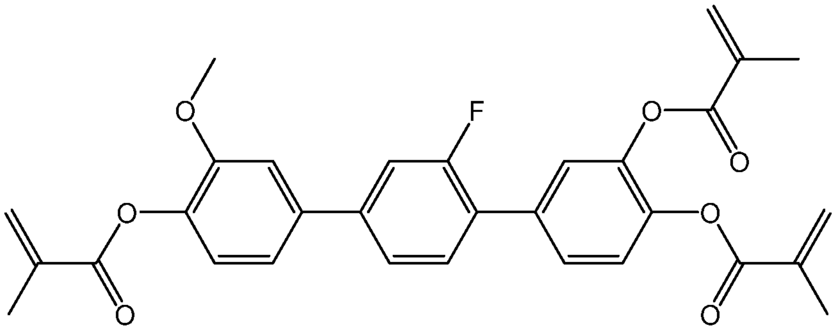

MT-4-6a

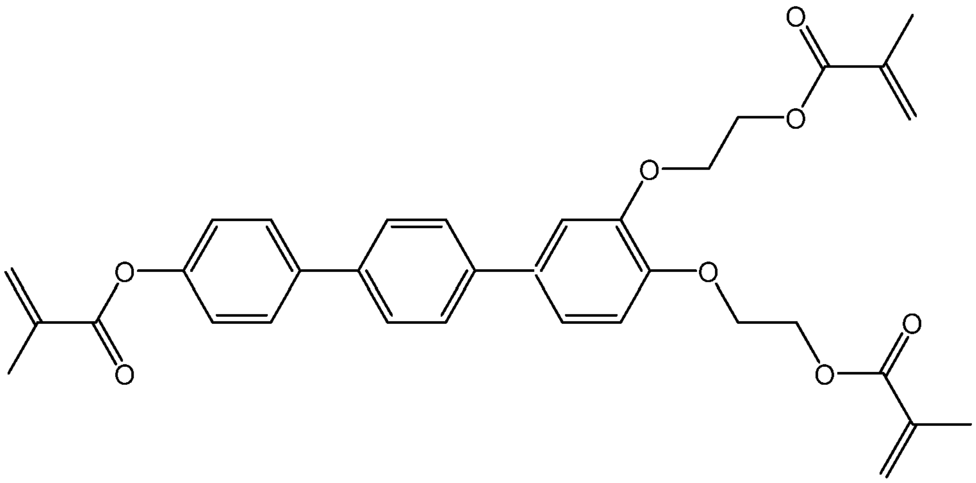

MT-4-7a

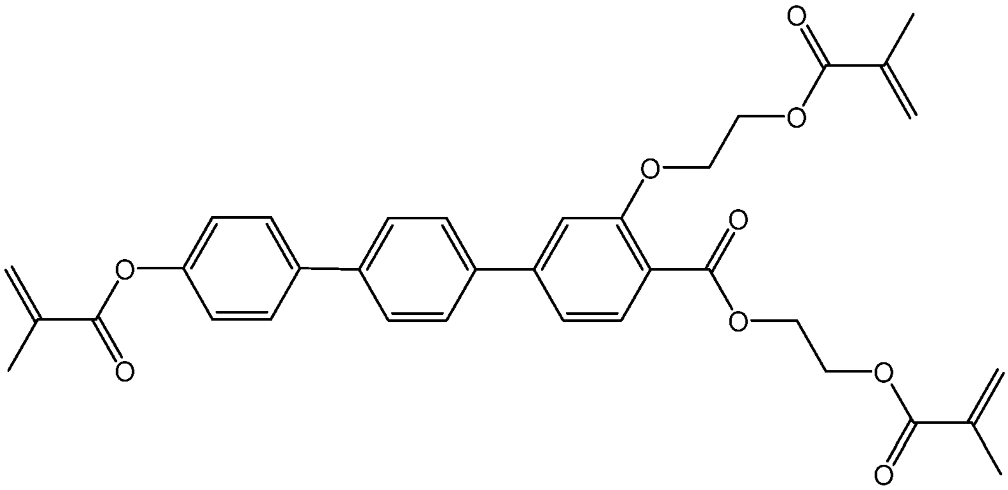

MT-4-7b

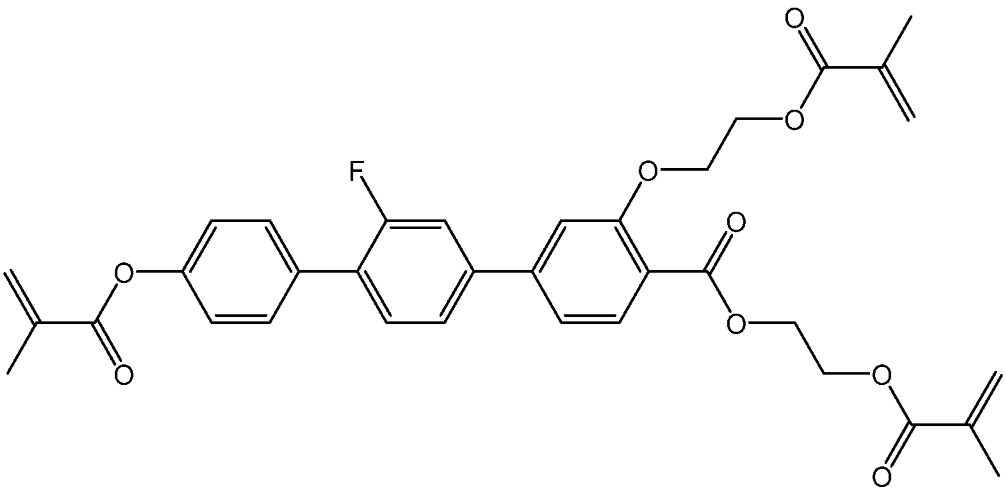

MT-4-8a

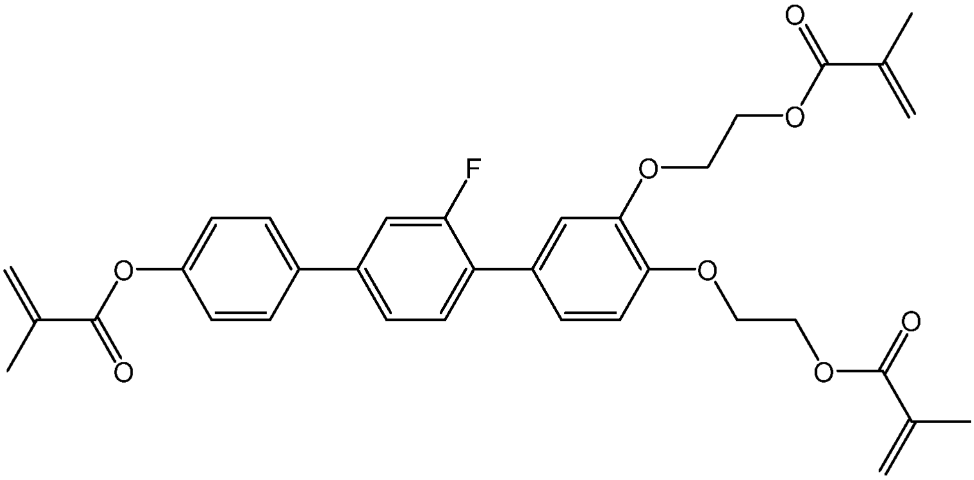

MT-4-9a

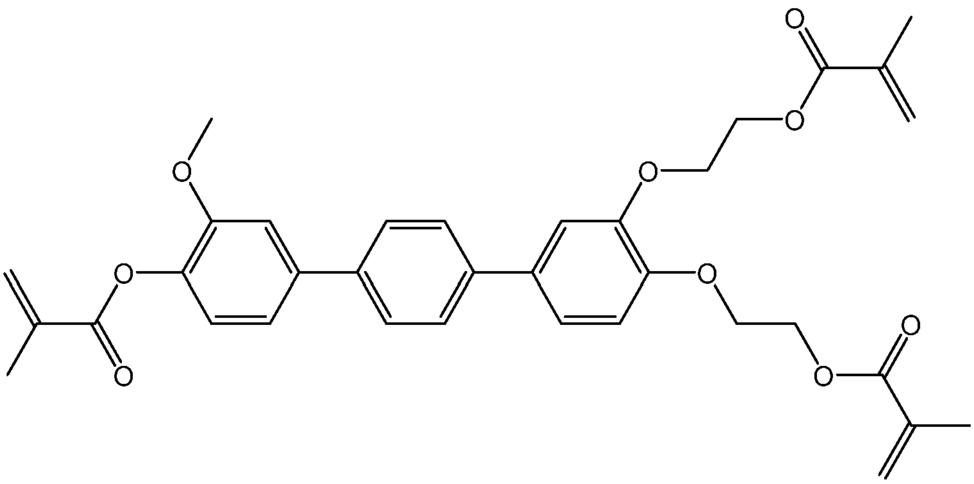

MT-4-10a

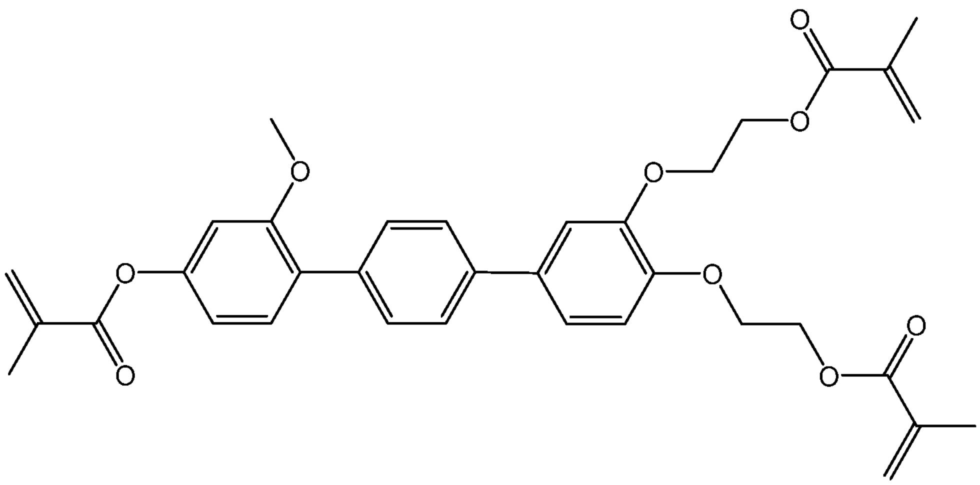

MT-4-11a

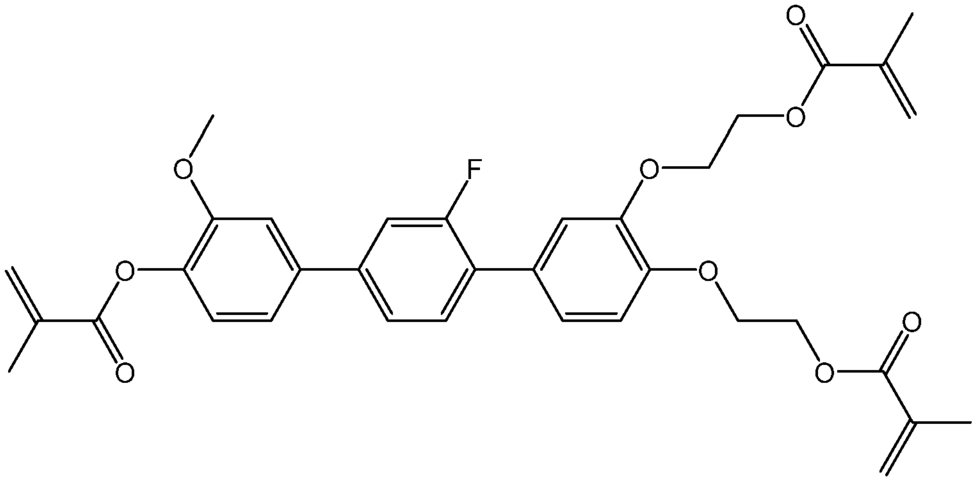

MT-4-12a

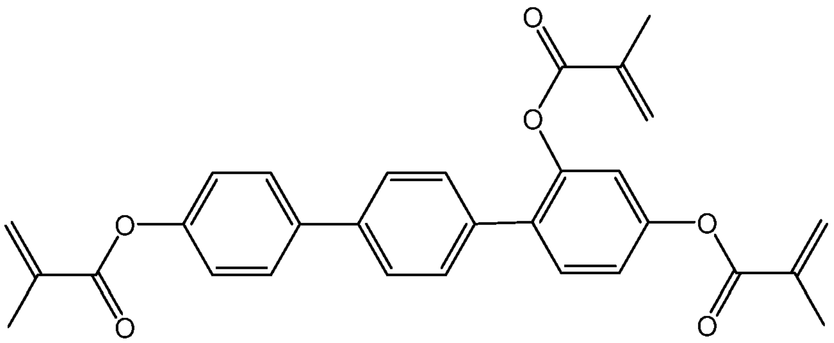

MT-5-1a

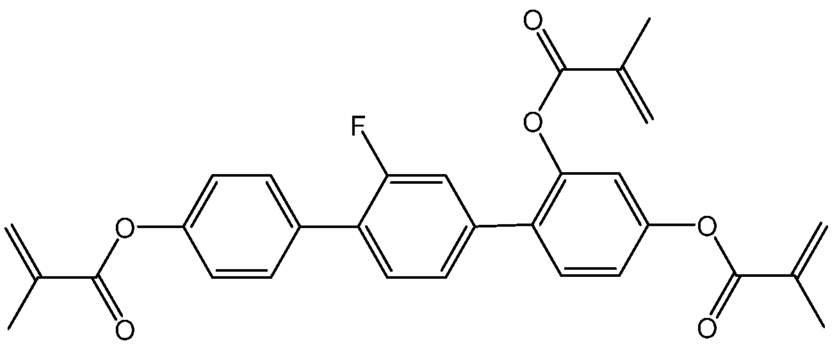

MT-5-2a

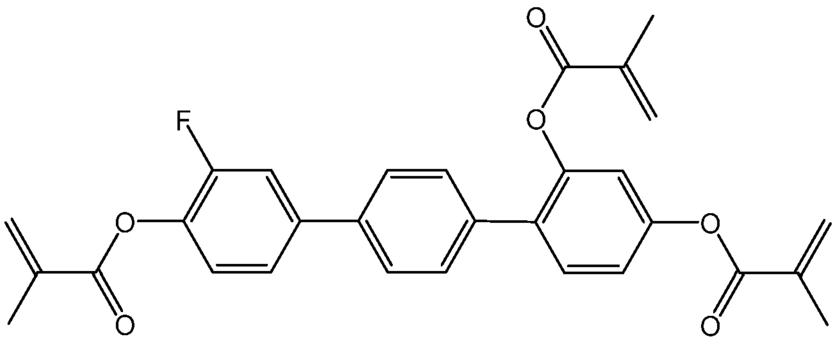

MT-5-4a

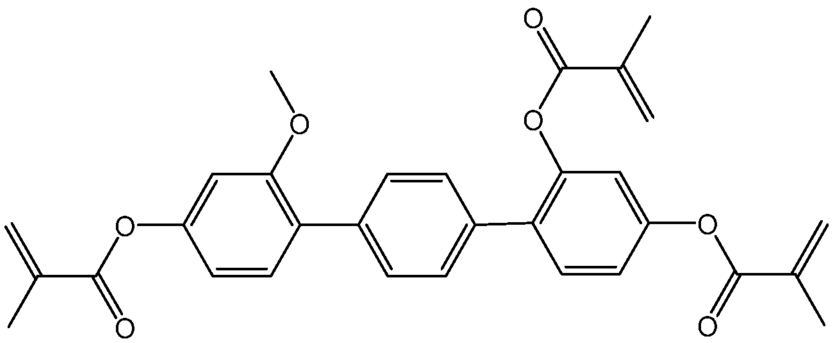

MT-5-5a

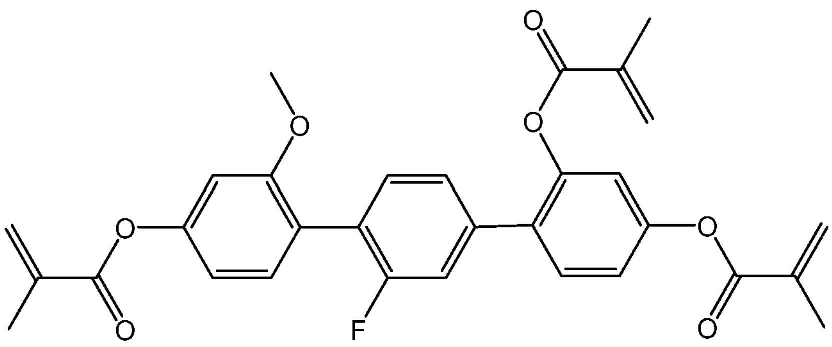

MT-5-6a

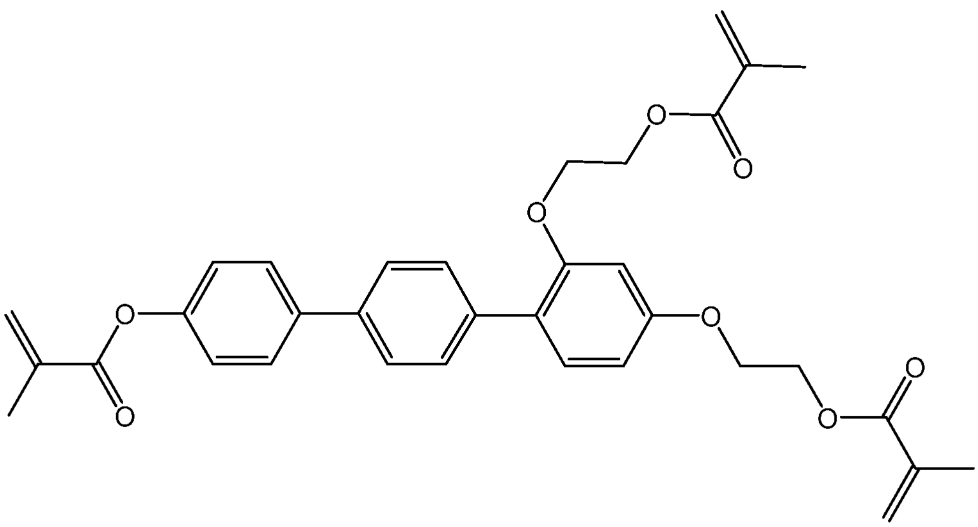

MT-5-7a

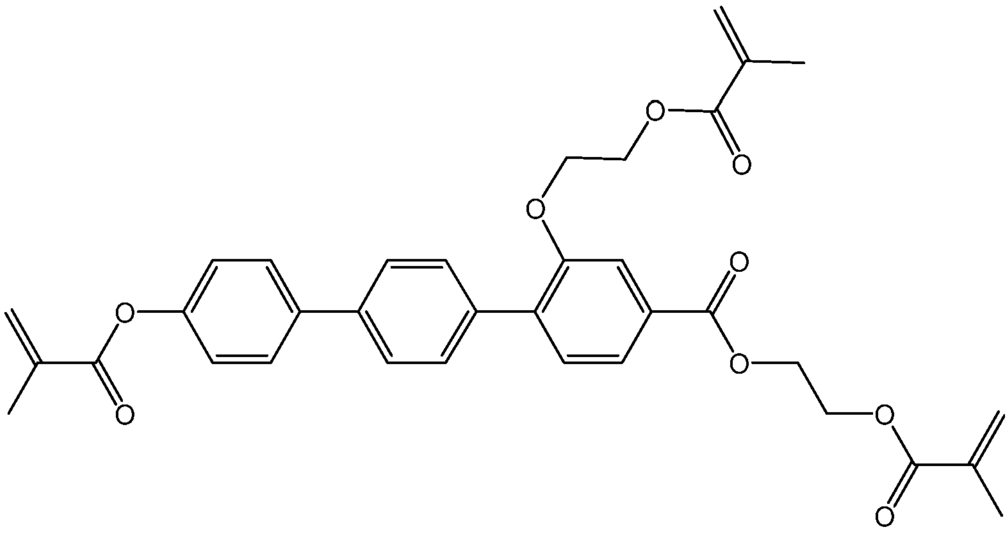

MT-5-7b

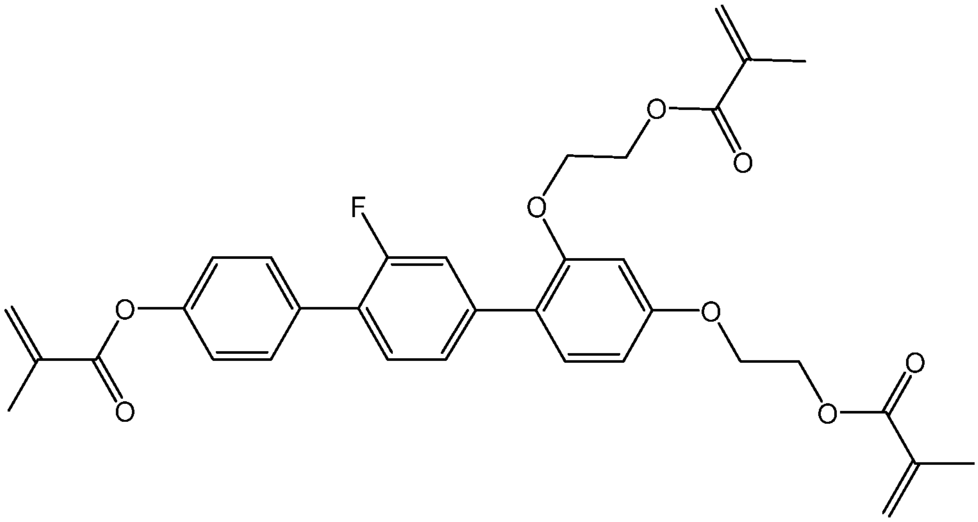

MT-5-8a

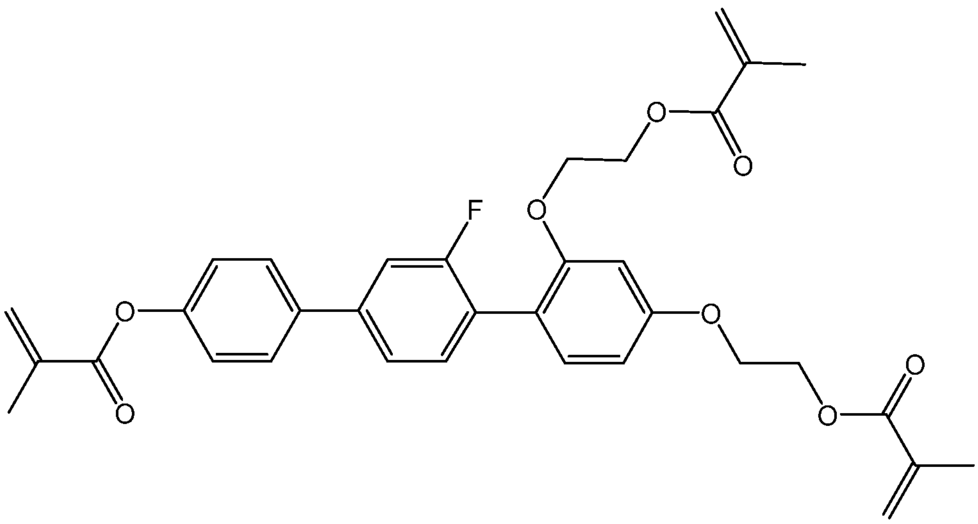

MT-5-9a

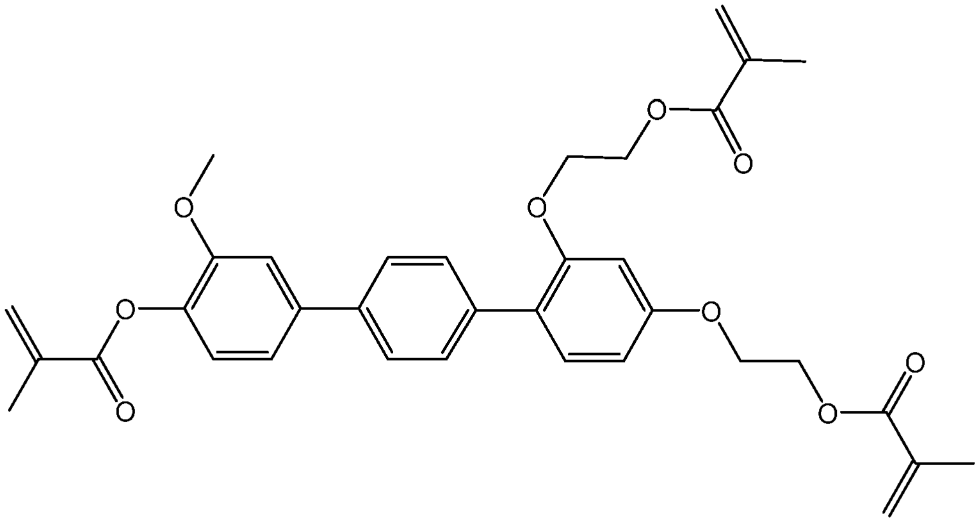

MT-5-10a

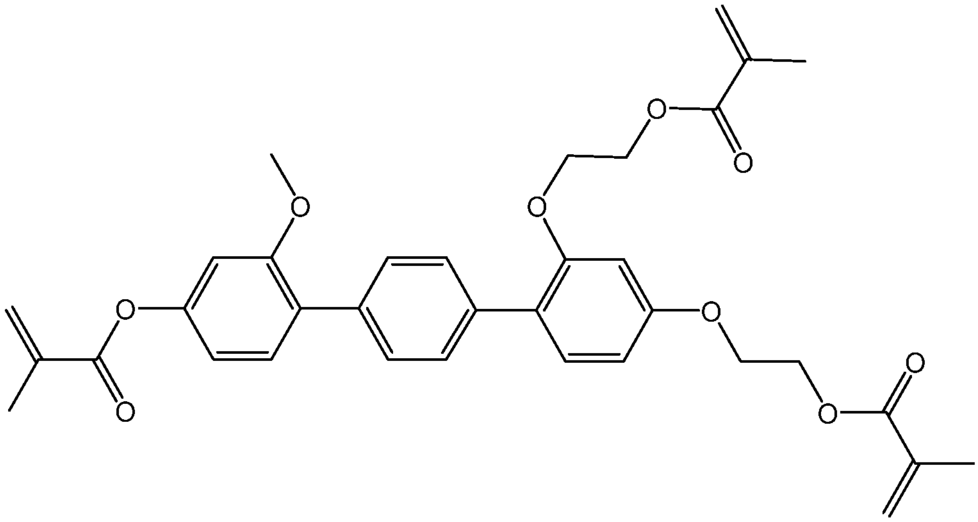

MT-5-11a

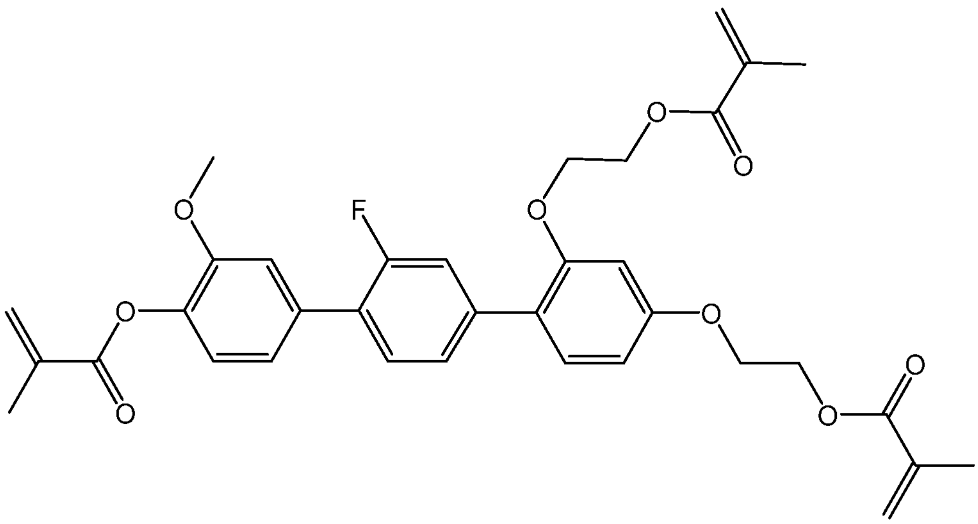

MT-5-12a

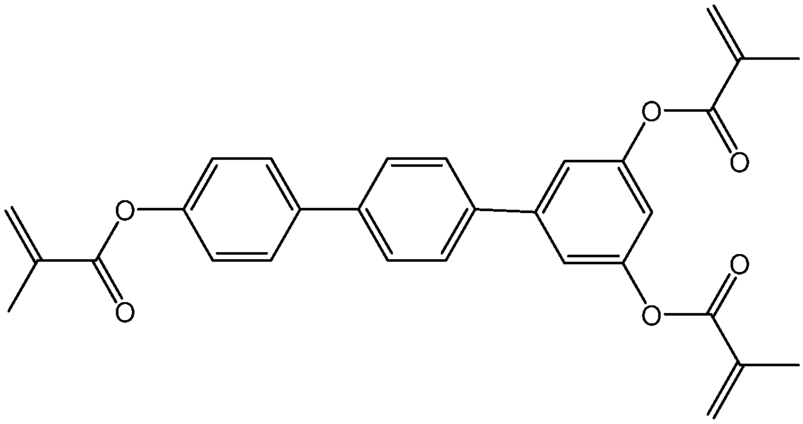

MT-6-1a

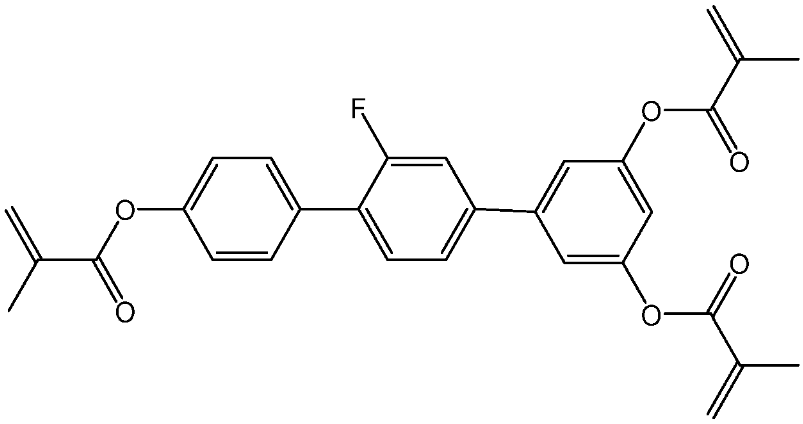

MT-6-2a

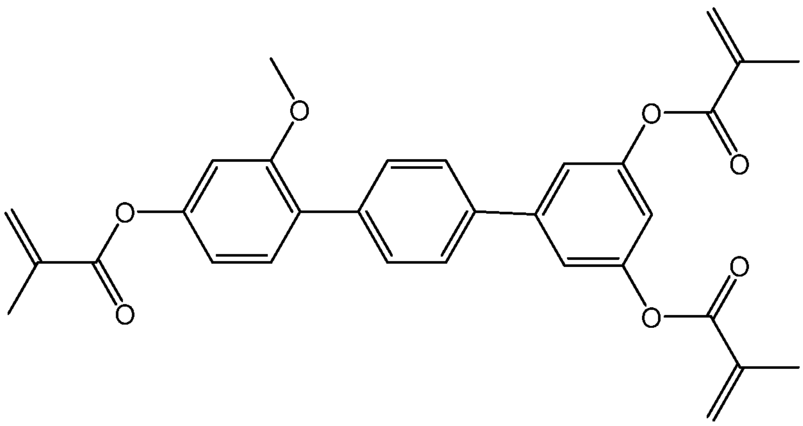

MT-6-5a

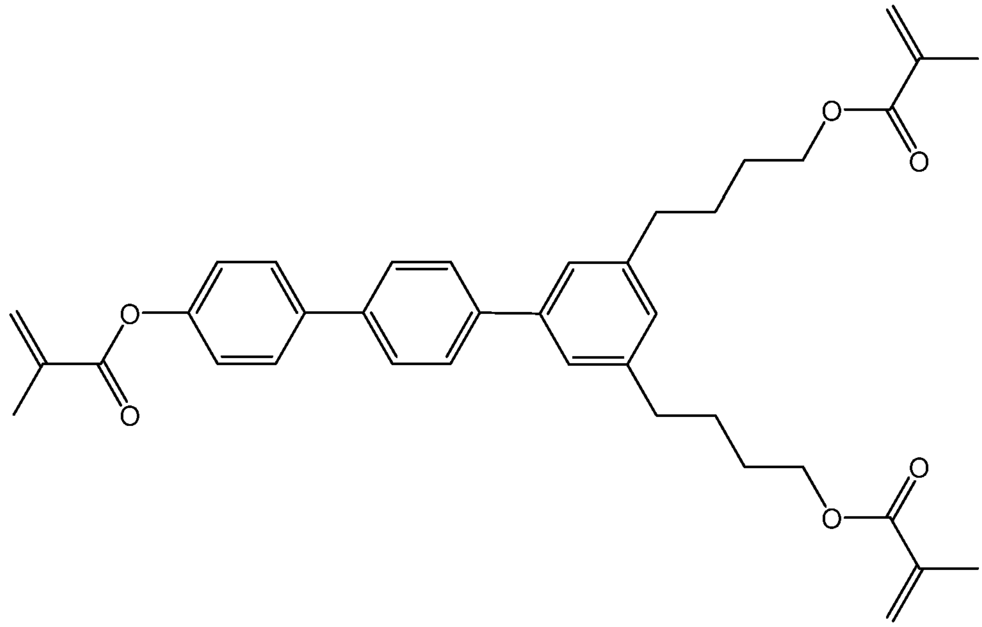

MT-6-7a

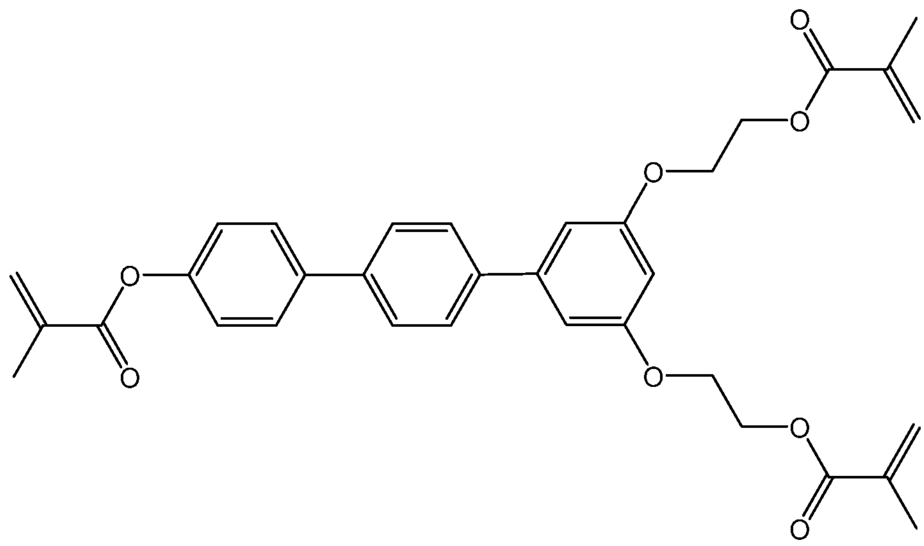

MT-6-7b

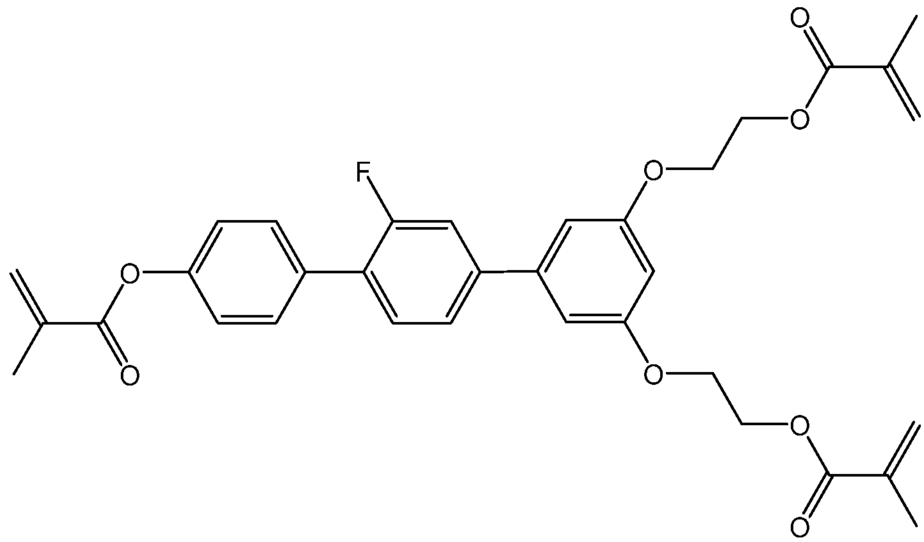

MT-6-8a

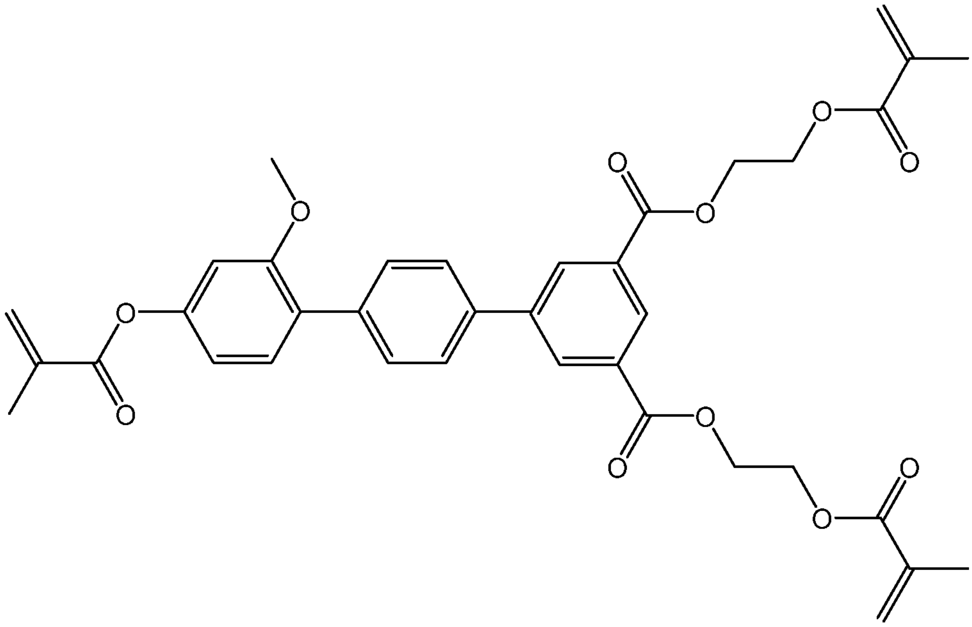

MT-6-11a

Of the compounds of formula MT-1 to MT-3 very preferred are the compounds of formula MT-1-1a, MT-1 -2a, MT-1 -2b, MT-2-1a, MT-2-2a, MT-2-2b, MT-3-1a, MT-3-2a and MT-3-2b. Most preferred are the compounds of formula MT-1-1a, MT-1-2a, MT-1-2b, MT-2-1a, MT-2-2a and MT-2-2b.

Of the compounds of formula MT-4 to MT-6 very preferred are the compounds of formula MT-4-1a, MT-4-2a, MT-4-3a, MT-4-4a, MT-4-5a, MT-4-6a, MT-4-7a, MT-4-7b, MT-4-8a, MT-4-9a, MT-4-10a, MT-4-11a, MT-4-12a, MT-5-1a, MT-5-2a, MT-5-4a, MT-5-5a, MT-5-6a, MT-5-7a, MT-5-7b, MT-5-8a, MT-5-9a, MT-5-10a, MT-5-11a and MT-5-12a. Most preferred are the compounds of formula MT-4-1a, MT-4-7a, MT-4-7b, MT-5-1a, MT-5-7a and MT-5-7b.

Further preferred are the compounds of formulae MT-1-1a to MT-6-11a wherein one or two of the methacrylate groups are replaced by acrylate groups. Further preferred are the compounds of formulae MT-1-1a to MT-6-11a wherein all methacrylate groups are replaced by acrylate groups.

Further preferred compounds of formula MT are selected from Table D below.

Furthermore, it is possible to add to the LC media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

The individual components of the above-listed preferred embodiments of the LC media according to the invention are either known or methods for the preparation thereof can readily be derived from the prior art by the person skilled in the relevant art, since they are based on standard methods described in the literature. Corresponding compounds of the formula CY are described, for example, in EP-A-0 364 538. Corresponding compounds of the formula ZK are described, for example, in DE-A-26 36 684 and DE-A-33 21 373.

The LC media which can be used in accordance with the invention are prepared in a manner conventional per se, for example by mixing one or more of the above-mentioned compounds with one or more polymerizable compounds as defined above, and optionally with further liquid-crystalline compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing. The invention furthermore relates to the process for the preparation of the LC media according to the invention.

It goes without saying to the person skilled in the art that the LC media according to the invention may also comprise compounds in which, for example, H, N, O, Cl, F have been replaced by the corresponding isotopes like deuterium etc.

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

Preferred mixture components are shown in Table A below.

**Table A**

In Table A, m and n are independently of each other an integer from 1 to 12, preferably 1, 2, 3, 4, 5 or 6, k is 0, 1, 2, 3, 4, 5 or 6, and $(O)C_mH_{2m+1}$ means $C_mH_{2m+1}$ or $OC_mH_{2m+1}$.

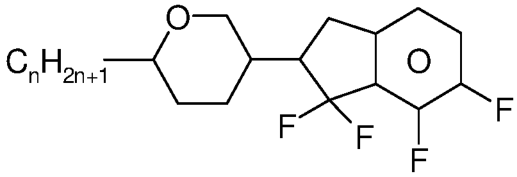

**AIK-n-F**

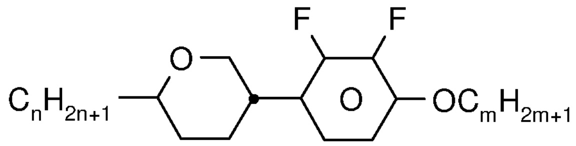

**AIY-n-Om**

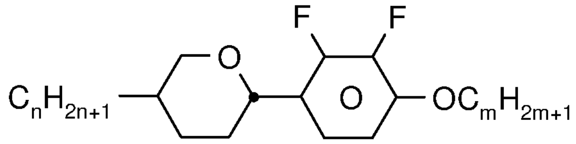

**AY-n-Om**

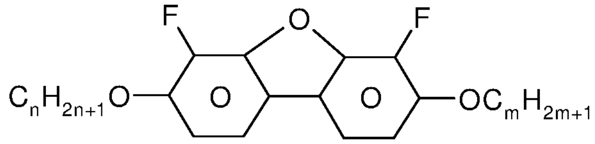

**B-nO-Om**

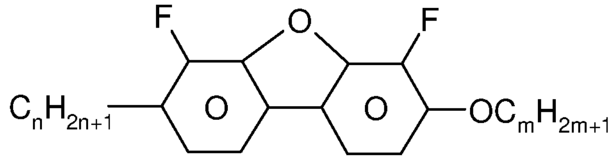

**B-n-Om**

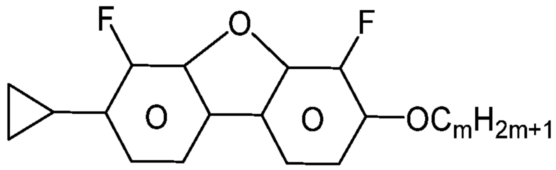

**B-3Cy-Om**

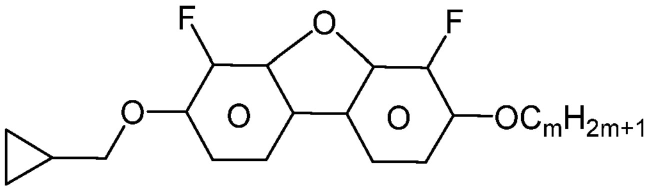

**B-3Cy1O-Om**

(continued)

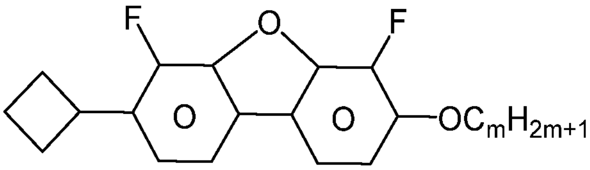

**B-4Cy-Om**

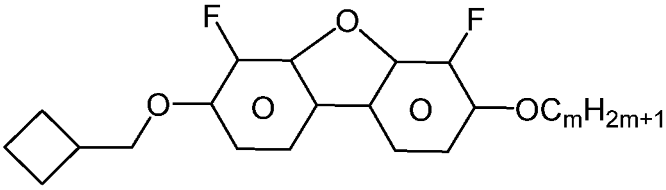

**B-4Cy1O-Om**

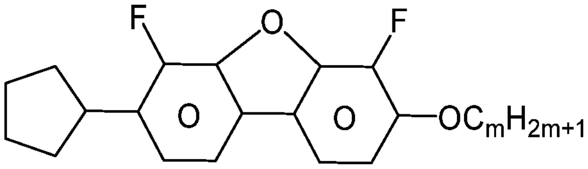

**B-5Cy-Om**

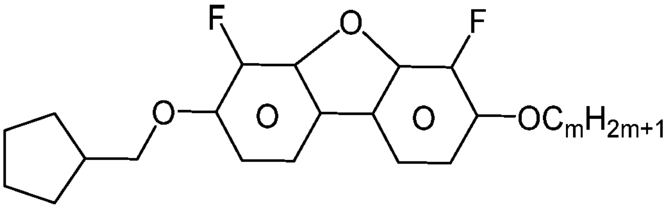

**B-5Cy1O-Om**

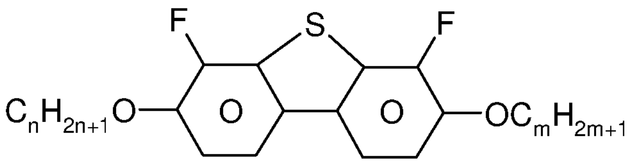

**B(S)-nO-Om**

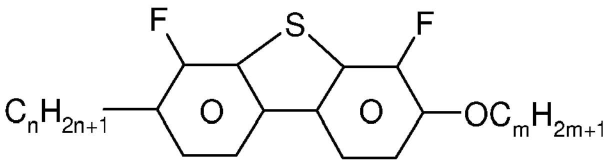

**B(S)-n-Om**

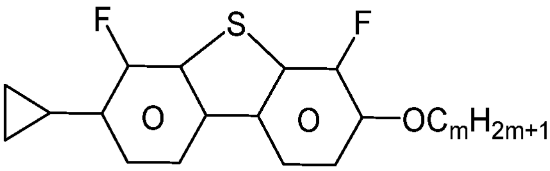

**B(S)-3Cy-Om**

(continued)

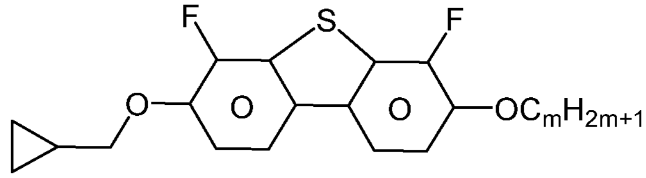

**B(S)-3Cy1O-Om**

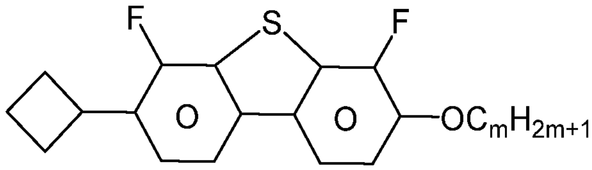

**B(S)-4Cy-Om**

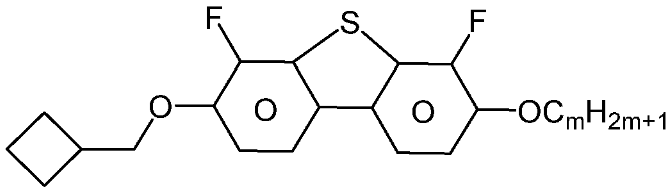

**B(S)-4Cy1O-Om**

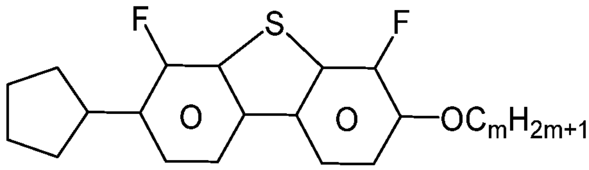

**B(S)-5Cy-Om**

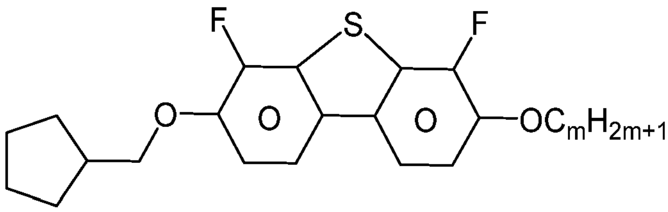

**B(S)-5Cy1O-Om**

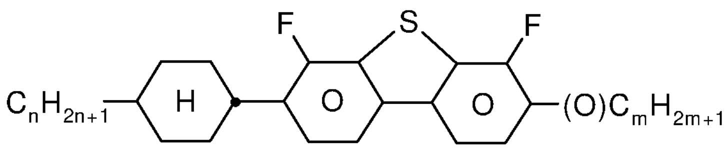

**CB(S)-n-(O)m**

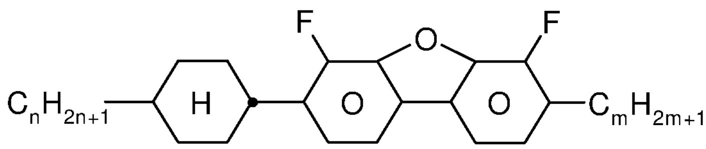

**CB-n-m**

(continued)

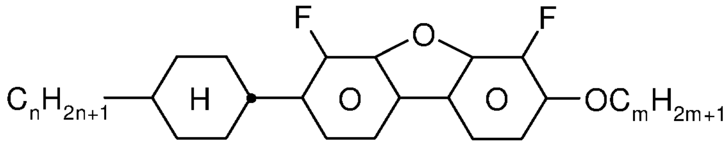

**CB-n-Om**

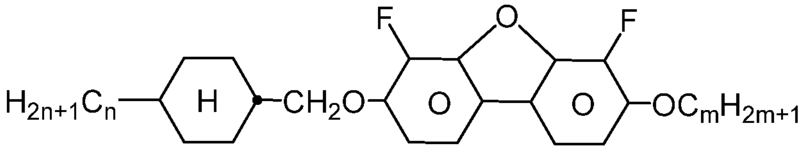

**COB-n-Om**

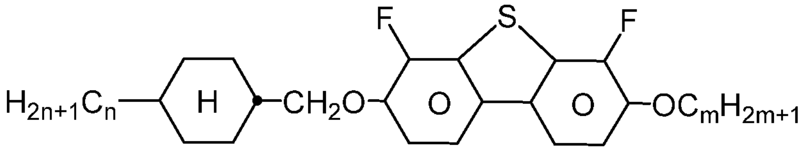

**COB(S)-n-Om**

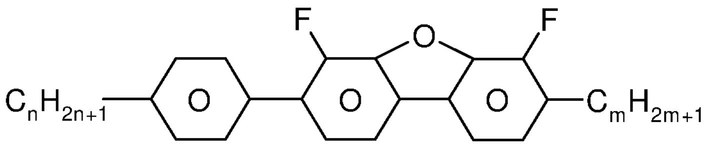

**PB-n-m**

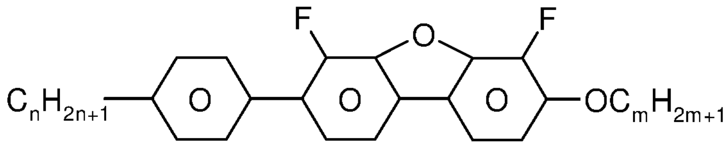

**PB-n-Om**

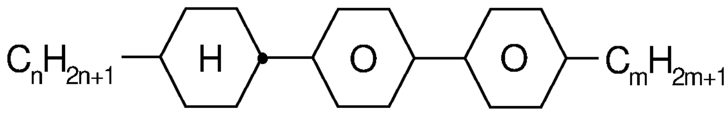

**BCH-nm**

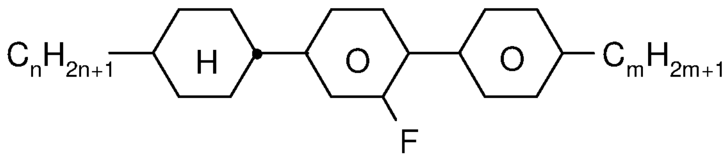

**BCH-nmF**

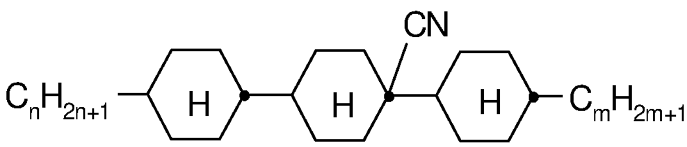

**BCN-nm**

(continued)

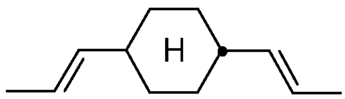

**C-1V-V1**

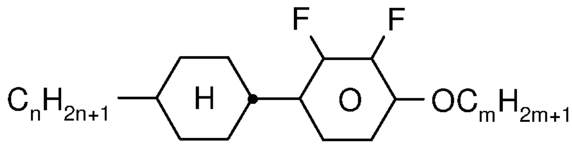

**CY-n-Om**

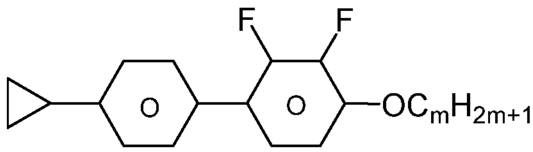

**CY-3Cy-Om**

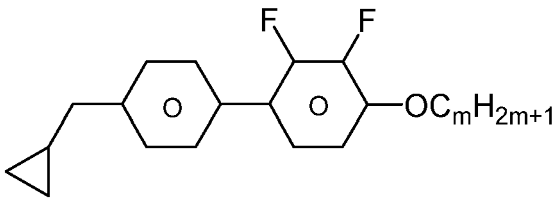

**CY-3Cy1-Om**

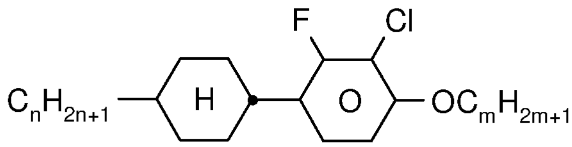

**CY(F,Cl)-n-Om**

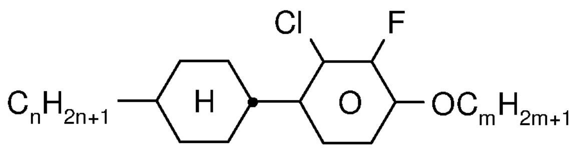

**CY(Cl,F)-n-Om**

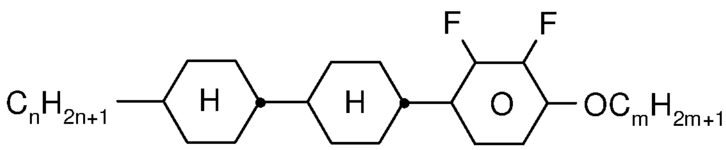

**CCY-n-Om**

(continued)

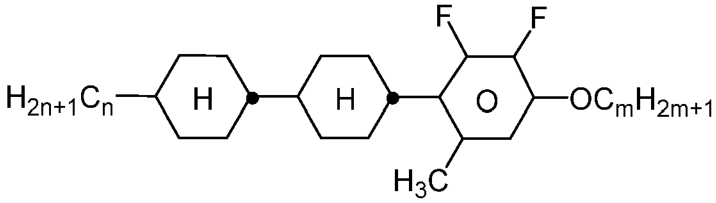

**CC1Y-n-Om**

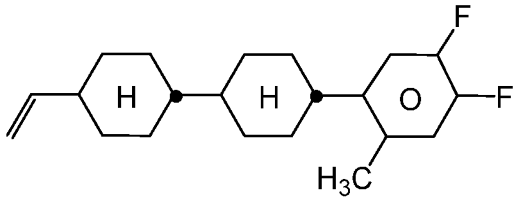

**CC1G-V-F**

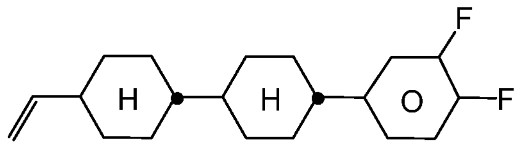

**CCG-V-F**

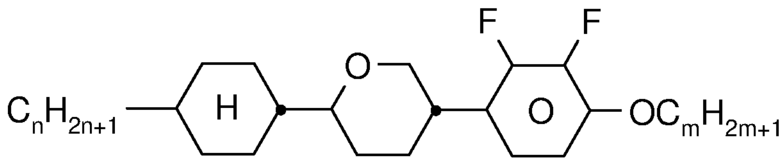

**CAIY-n-Om**

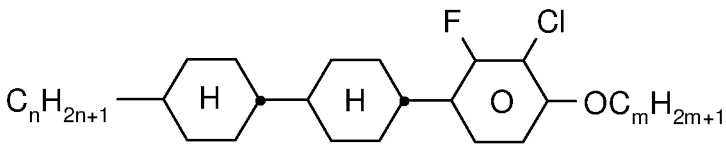

**CCY(F,Cl)-n-Om**

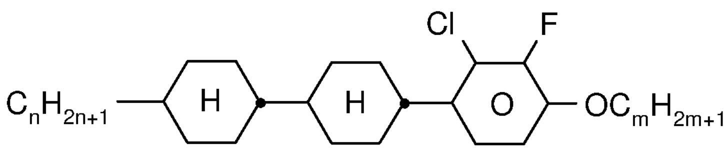

**CCY(Cl,F)-n-Om**

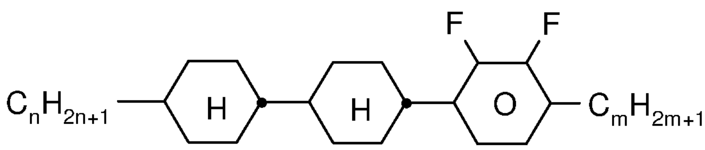

**CCY-n-m**

(continued)

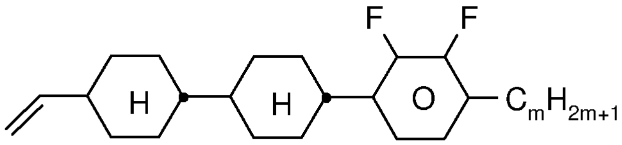

**CCY-V-m**

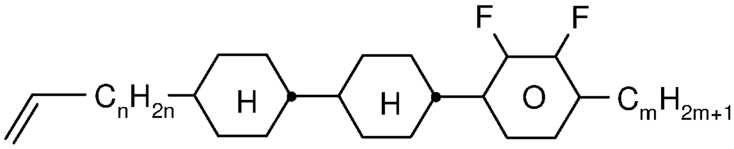

**CCY-Vn-m**

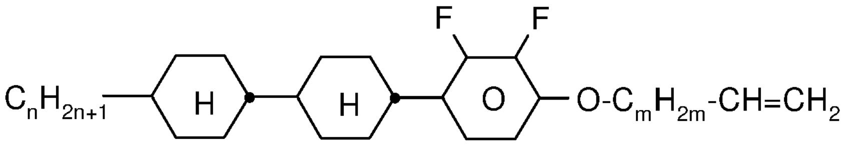

**CCY-n-OmV**

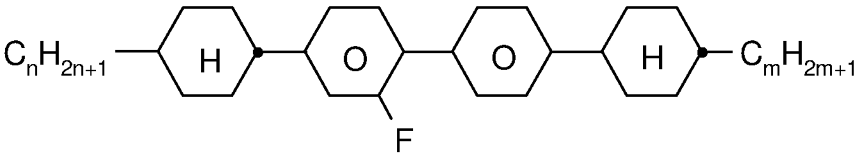

**CBC-nmF**

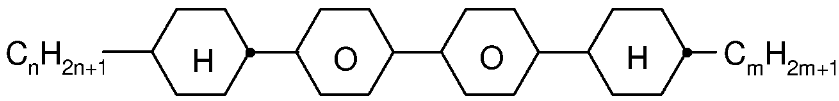

**CBC-nm**

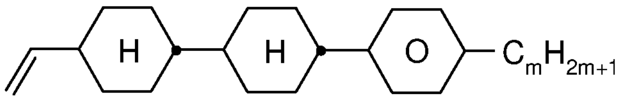

**CCP-V-m**

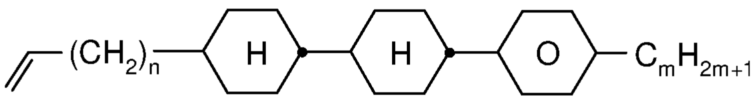

**CCP-Vn-m**

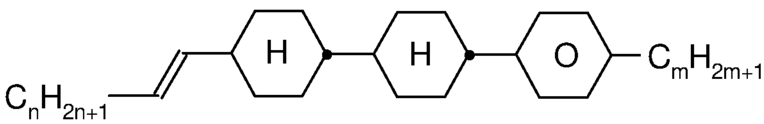

**CCP-nV-m**

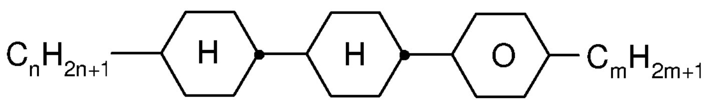

**CCP-n-m**

(continued)

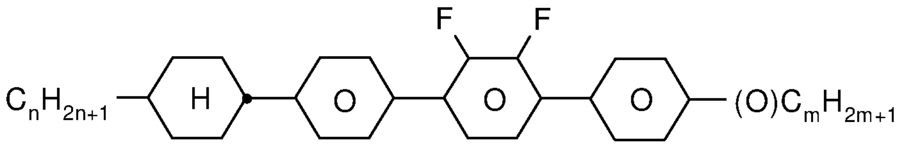

**CPYP-n-(O)m**

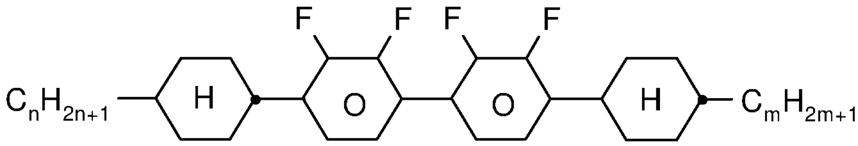

**CYYC-n-m**

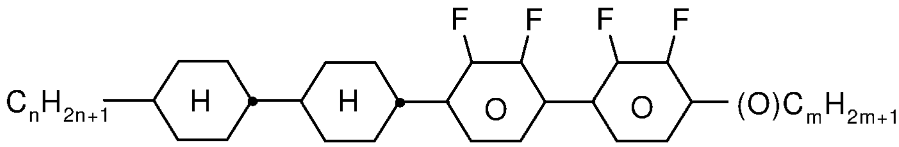

**CCYY-n-(O)m**

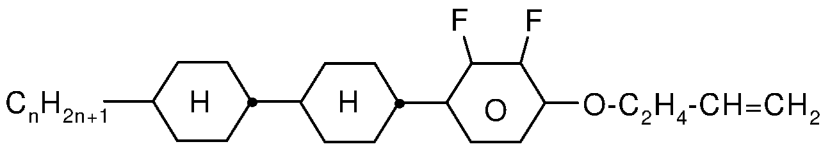

**CCY-n-O2V**

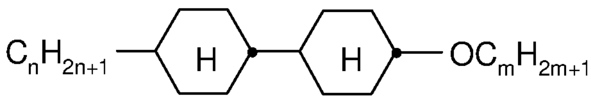

**CCH-nOm, CC-n-Om**

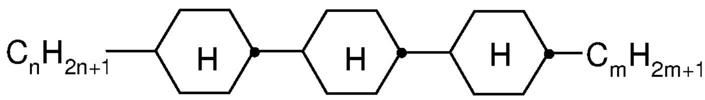

**CCC-n-m**

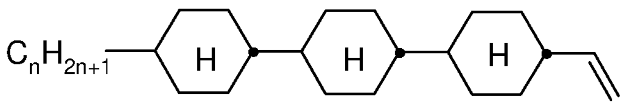

**CCC-n-V**

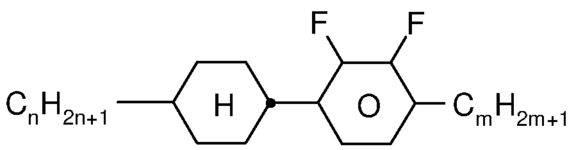

**CY-n-m**

(continued)

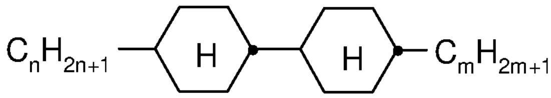

**CCH-nm, CC-n-m**

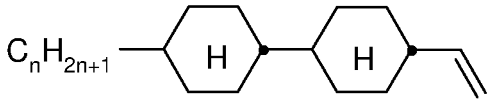

**CC-n-V**

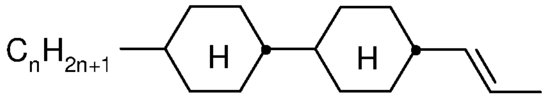

**CC-n-V1**

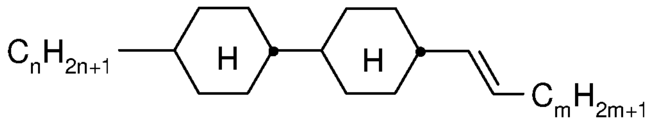

**CC-n-Vm**

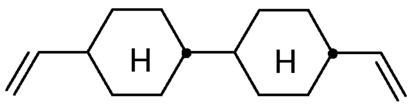

**CC-V-V**

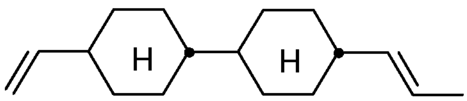

**CC-V-V1**

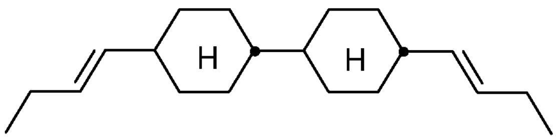

**CC-2V-V2**

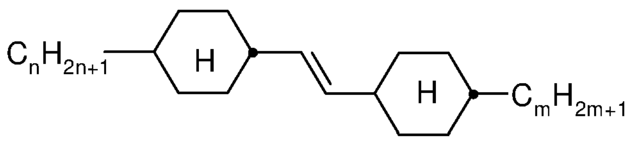

**CVC-n-m**

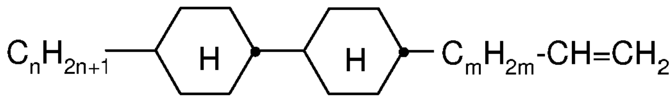

**CC-n-mV**

(continued)

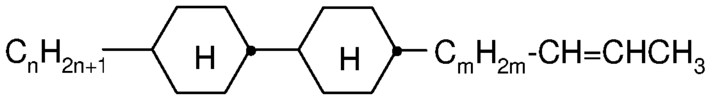

**CC-n-mV1**

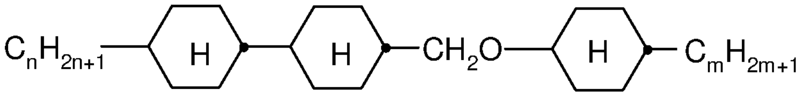

**CCOC-n-m**

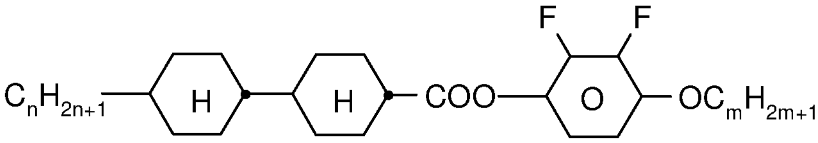

**CP-nOmFF**

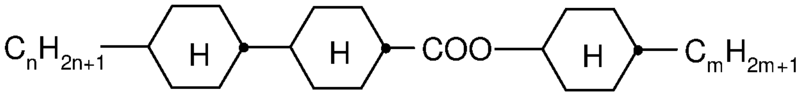

**CH-nm**

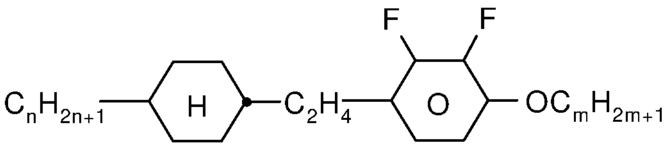

**CEY-n-Om**

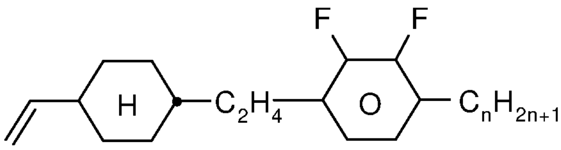

**CEY-V-n**

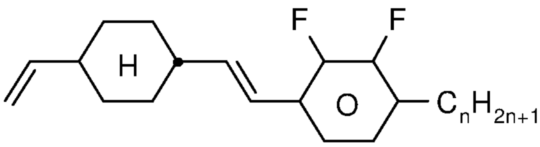

**CVY-V-n**

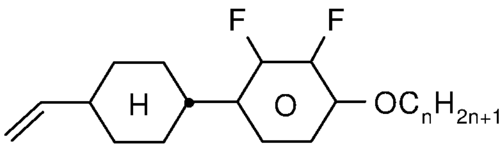

**CY-V-On**

(continued)

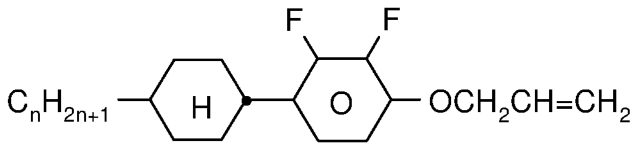

**CY-n-O1V**

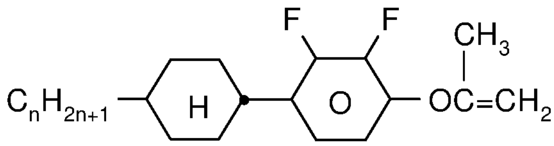

**CY-n-OC($CH_3$)=$CH_2$**

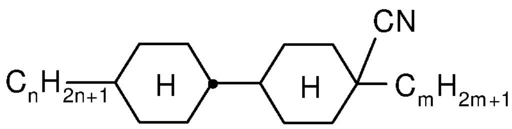

**CCN-nm**

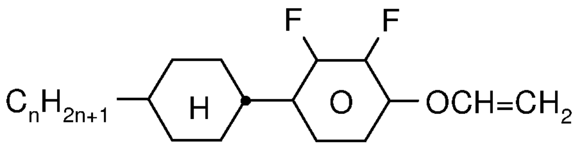

**CY-n-OV**

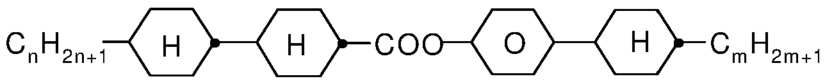

**CCPC-nm**

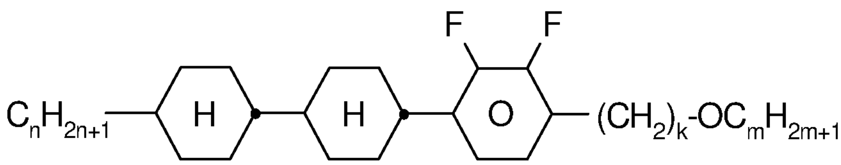

**CCY-n-kOm**

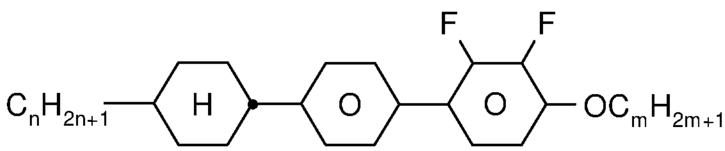

**CPY-n-Om**

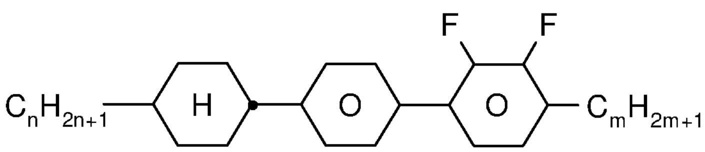

**CPY-n-m**

(continued)

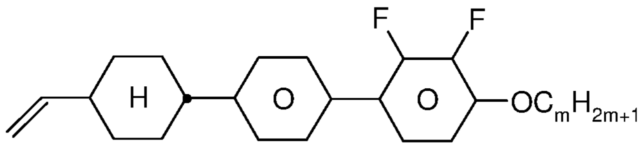

**CPY-V-Om**

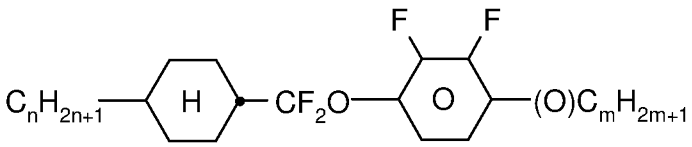

**CQY-n-(O)m**

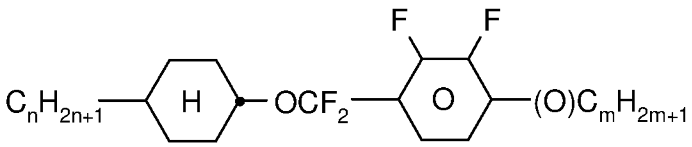

**CQIY-n-(O)m**

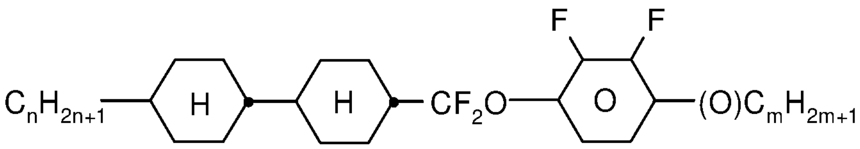

**CCQY-n-(O)m**

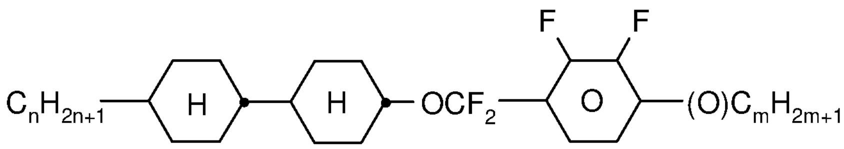

**CCQIY-n-(O)m**

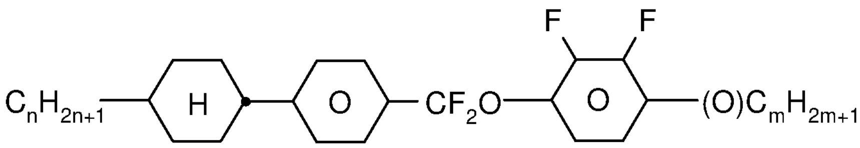

**CPQY-n-(O)m**

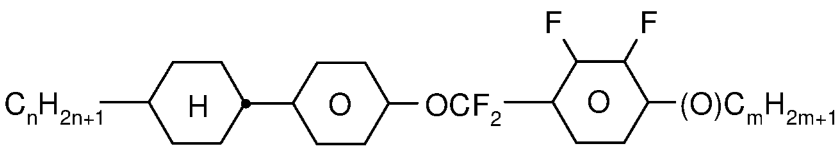

**CPQIY-n-(O)m**

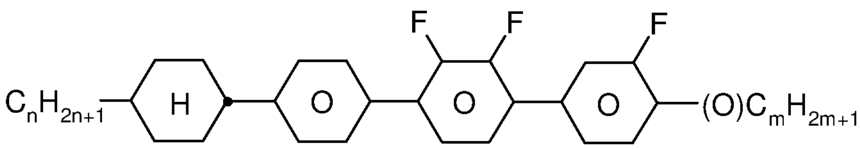

**CPYG-n-(O)m**

(continued)

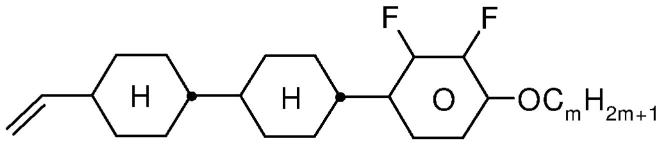

**CCY-V-Om**

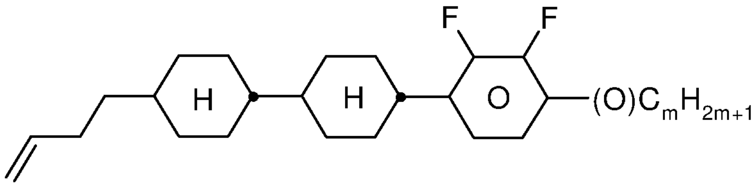

**CCY-V2-(O)m**

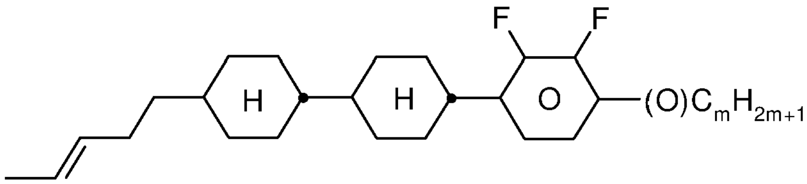

**CCY-1V2-(O)m**

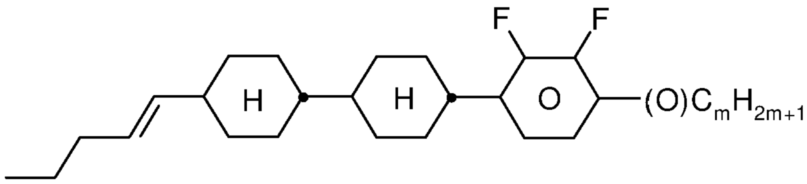

**CCY-3V-(O)m**

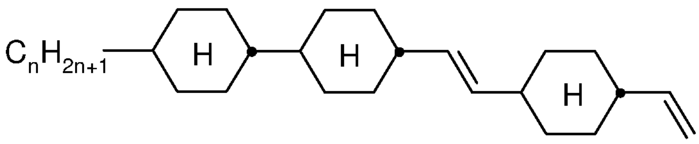

**CCVC-n-V**

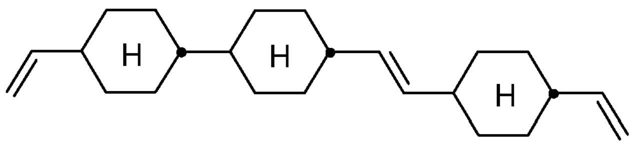

**CCVC-V-V**

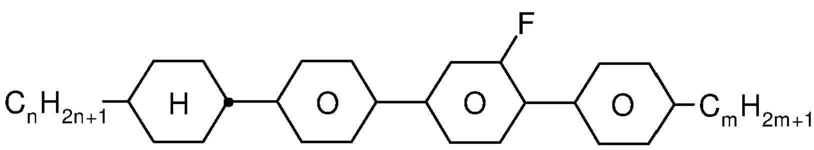

**CPGP-n-m**

(continued)

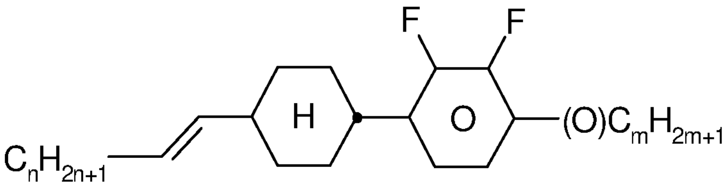

**CY-nV-(O)m**

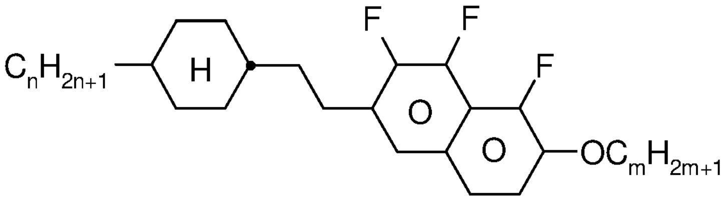

**CENaph-n-Om**

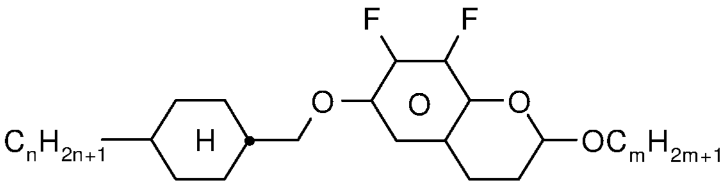

**COChrom-n-Om**

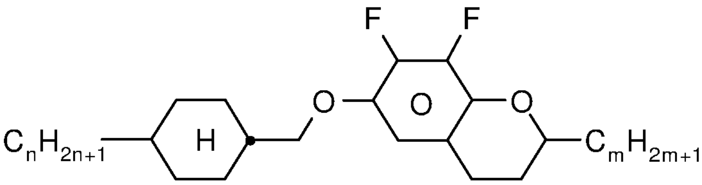

**COChrom-n-m**

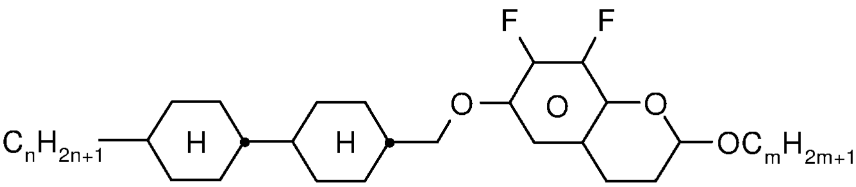

**CCOChrom-n-Om**

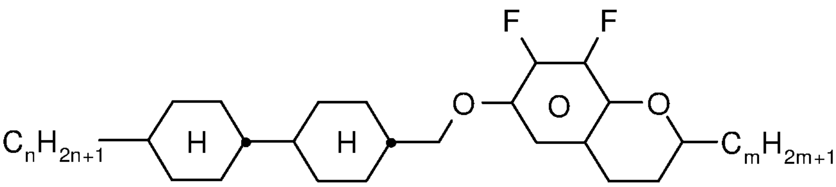

**CCOChrom-n-m**

(continued)

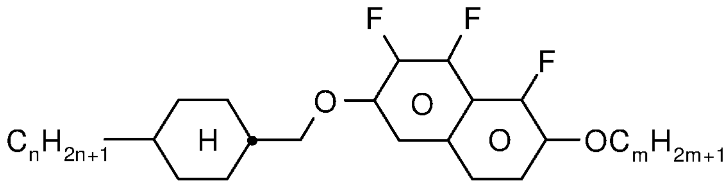

**CONaph-n-Om**

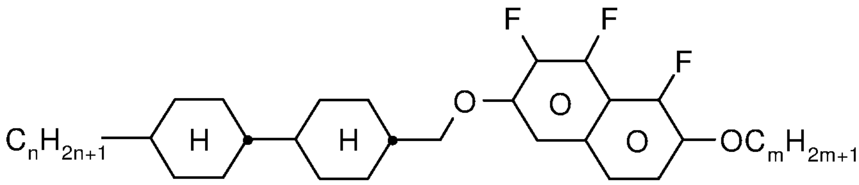

**CCONaph-n-Om**

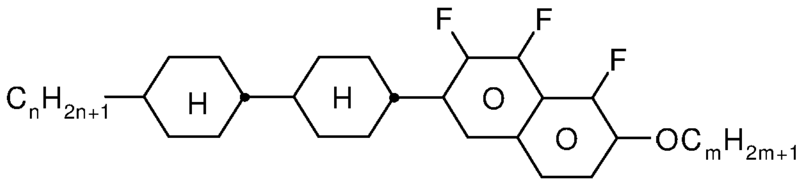

**CCNaph-n-Om**

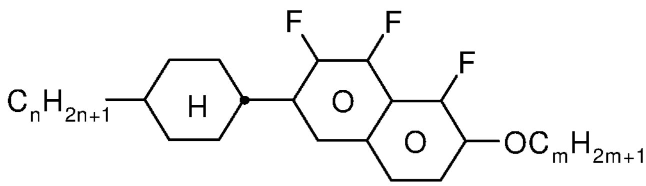

**CNaph-n-Om**

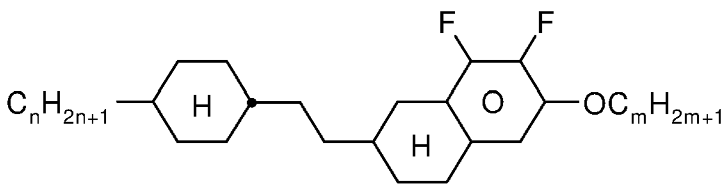

**CETNaph-n-Om**

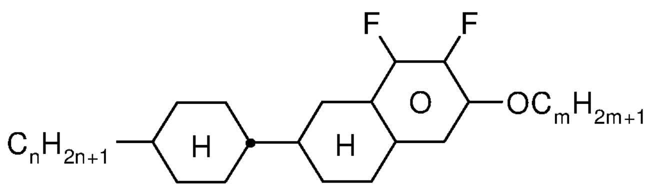

**CTNaph-n-Om**

(continued)

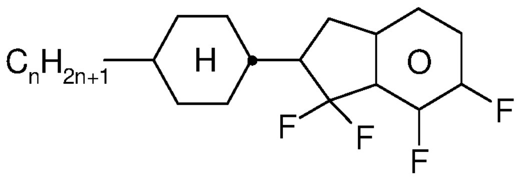

**CK-n-F**

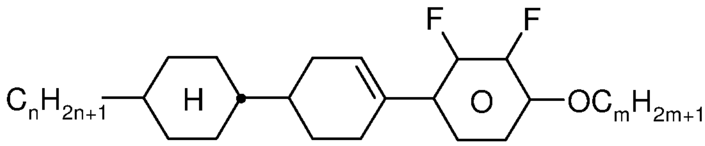

**CLY-n-Om**

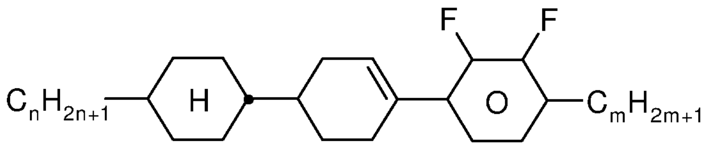

**CLY-n-m**

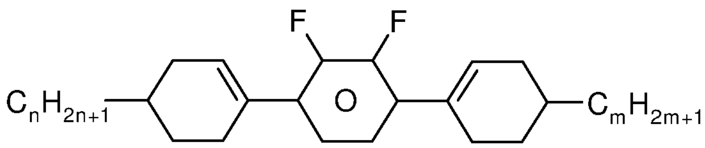

**LYLI-n-m**

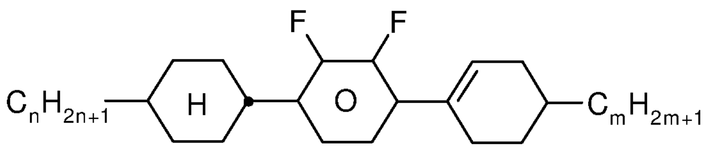

**CYLI-n-m**

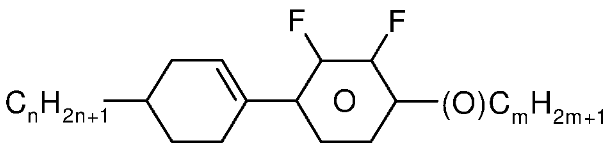

**LY-n-(O)m**

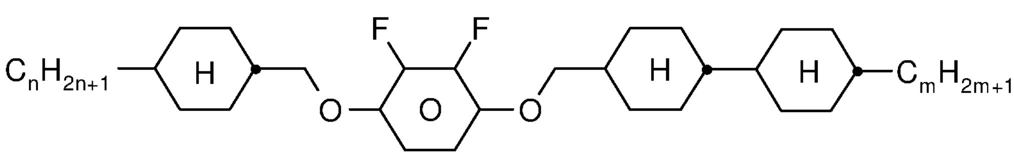

**COYOICC-n-m**

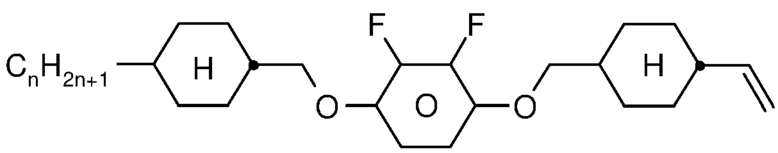

**COYOIC-n-V**

(continued)

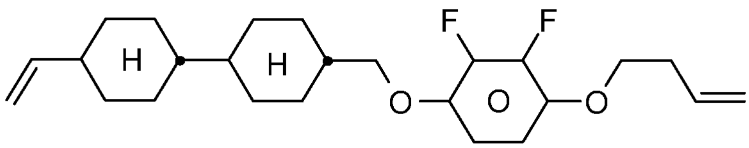

**CCOY-V-O2V**

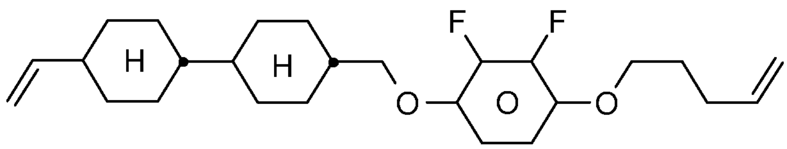

**CCOY-V-O3V**

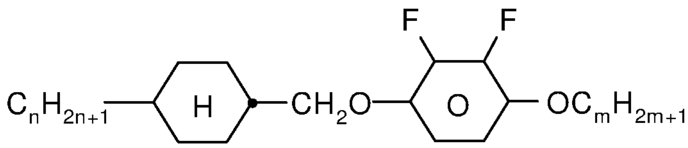

**COY-n-Om**

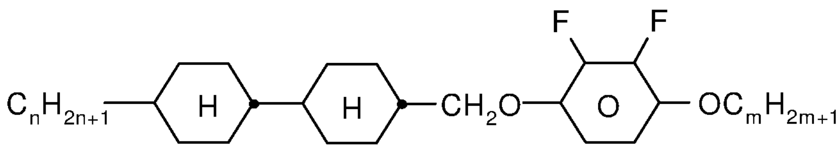

**CCOY-n-Om**

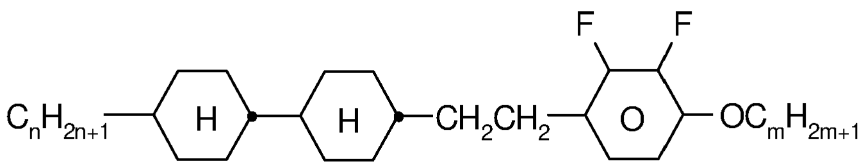

**CCEY-n-Om**

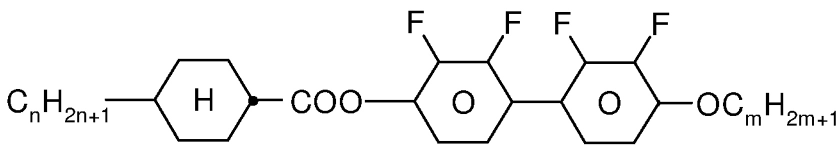

**CZYY-n-Om**

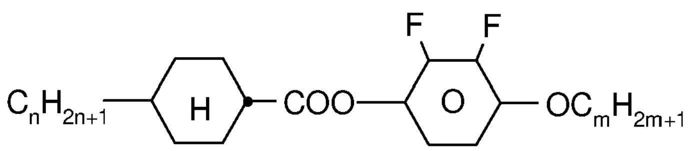

**D-nOmFF**

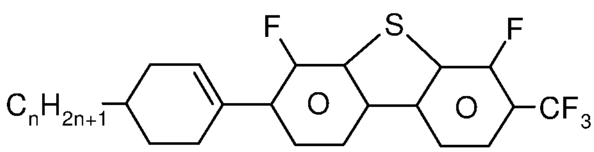

**LB(S)-n-T**

(continued)

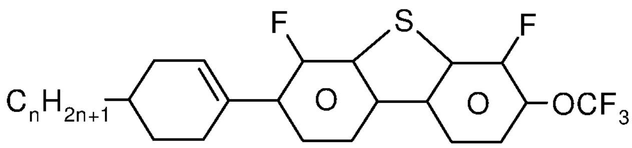

**LB(S)-n-OT**

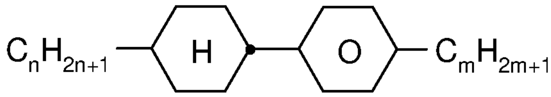

**PCH-nm, CP-n-m**

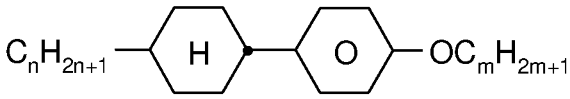

**PCH-nOm, CP-n-Om**

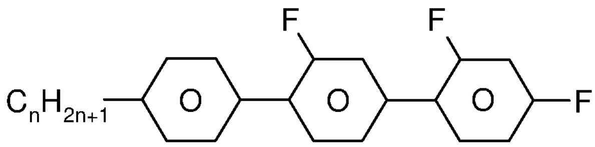

**PGIGI-n-F**

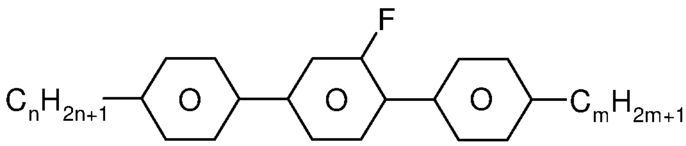

**PGP-n-m**

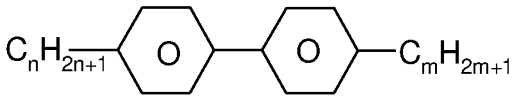

**PP-n-m**

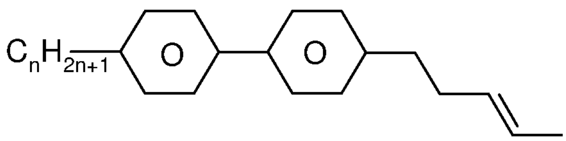

**PP-n-2V1**

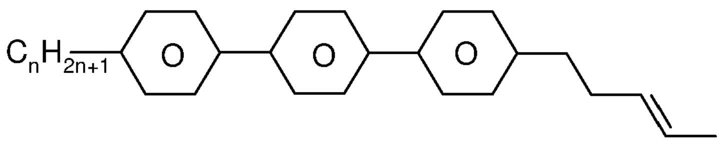

**PPP-n-2V1**

(continued)

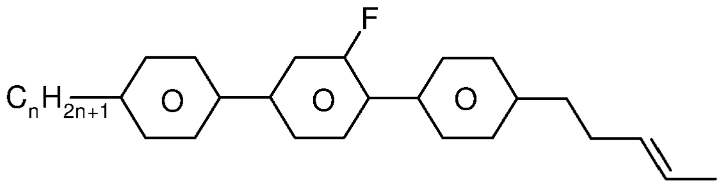

**PGP-n-2V1**

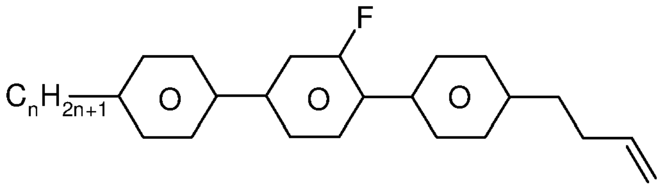

**PGP-n-2V**

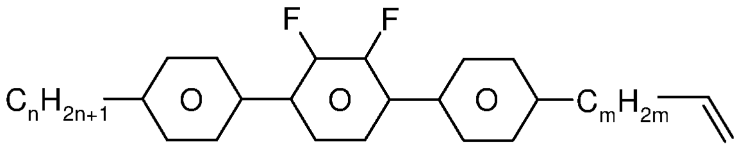

**PYP-n-mV**

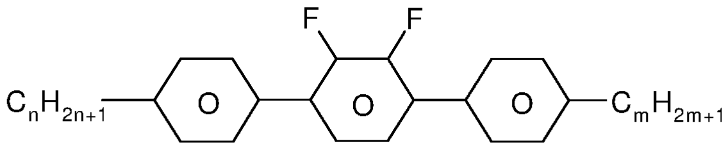

**PYP-n-m**

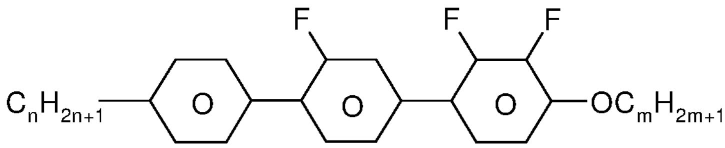

**PGIY-n-Om**

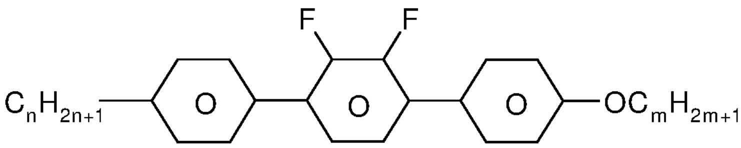

**PYP-n-Om**

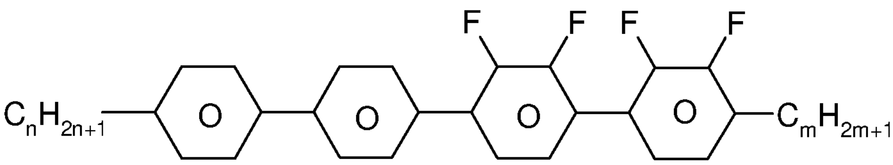

**PPYY-n-m**

(continued)

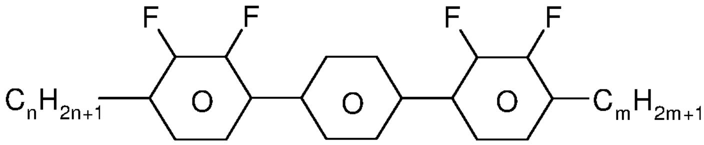

**YPY-n-m**

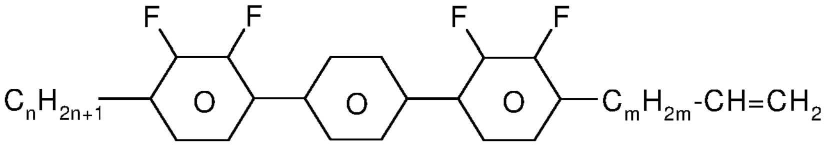

**YPY-n-mV**

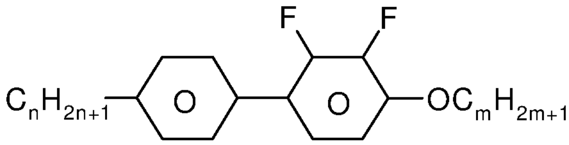

**PY-n-Om**

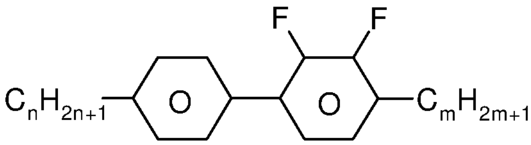

**PY-n-m**

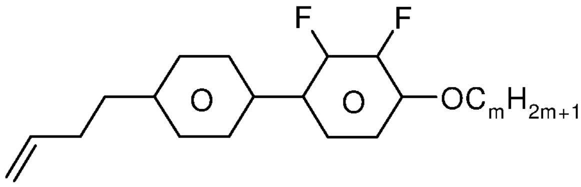

**PY-V2-Om**

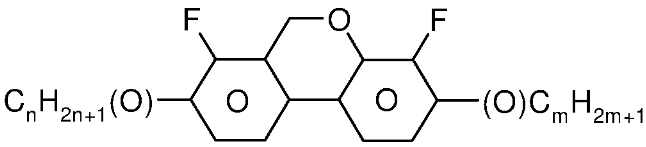

**DFDBC-n(O)-(O)m**

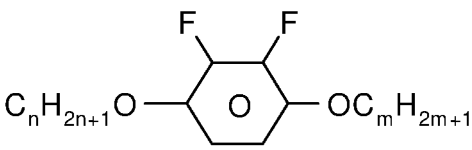

**Y-nO-Om**

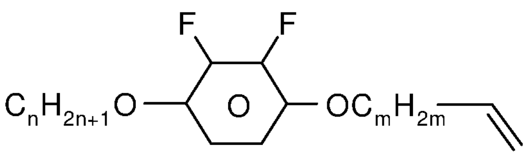

**Y-nO-OmV**

(continued)

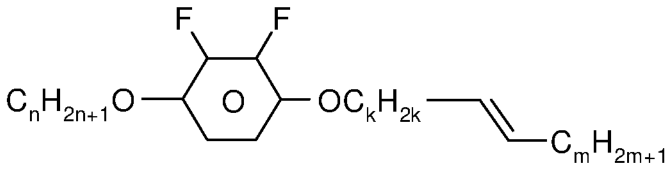

**Y-nO-OkVm**

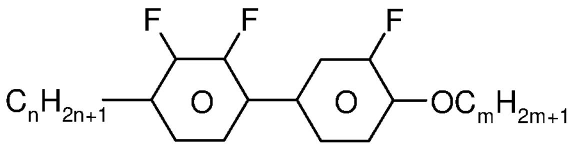

**YG-n-Om**

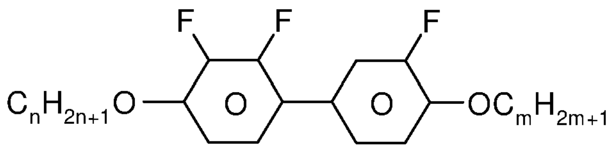

**YG-nO-Om**

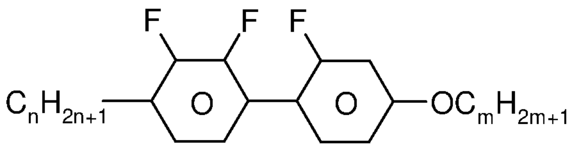

**YGI-n-Om**

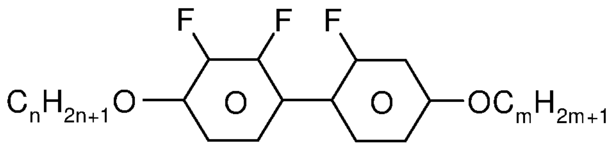

**YGI-nO-Om**

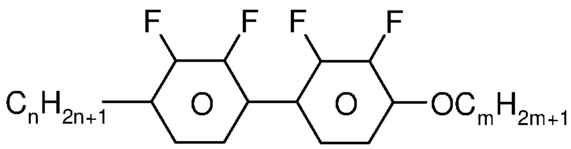

**YY-n-Om**

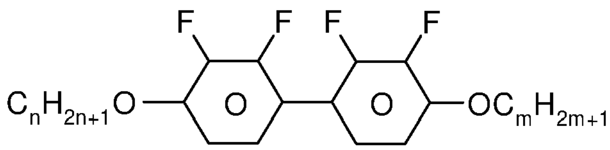

**YY-nO-Om**

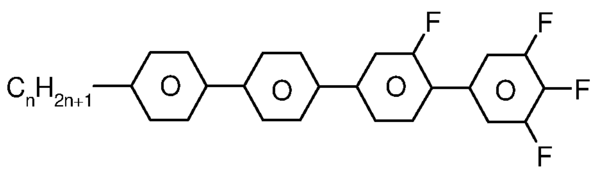

**PPGU-n-F**

In a preferred embodiment of the present invention, the LC media according to the invention comprise one or more compounds selected from the group consisting of compounds from Table A.

**Table B**

Table B shows possible chiral dopants which can be added to the LC media according to the invention.

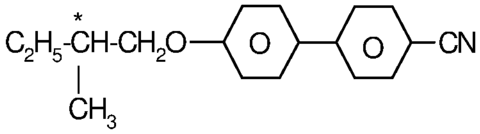

**C 15**

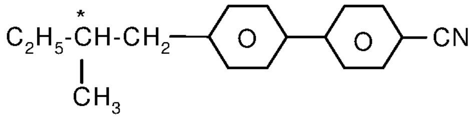

**CB 15**

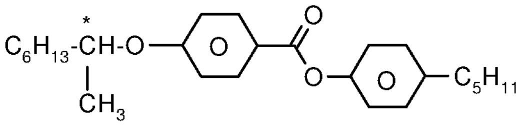

**CM 21**

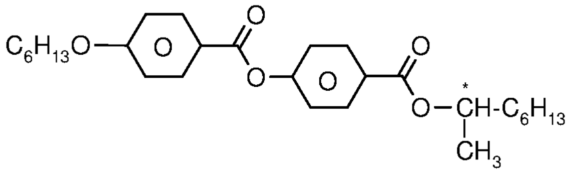

**R/S-811**

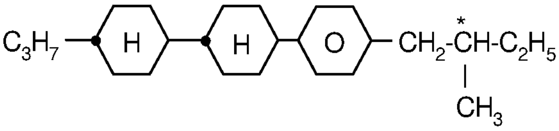

**CM 44**

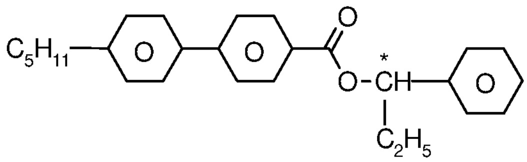

**CM 45**

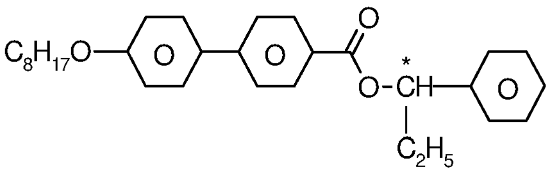

**CM 47**

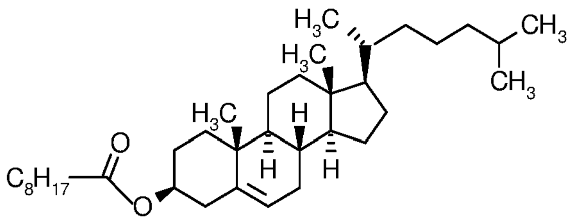

**CN**

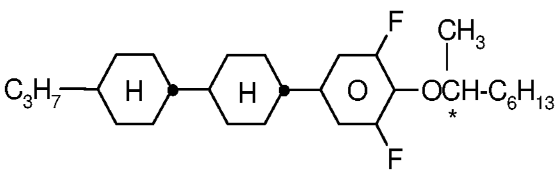

**R/S-2011**

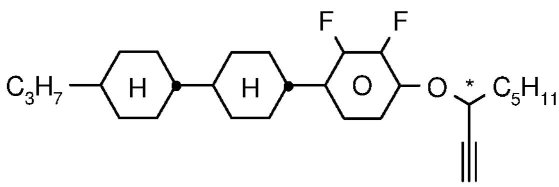

**R/S-3011**

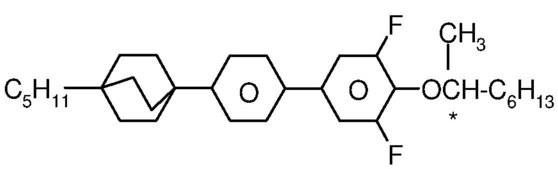

**R/S-4011**

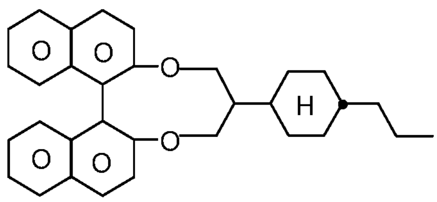

**R/S-5011**

(continued)

Table B shows possible chiral dopants which can be added to the LC media according to the invention.

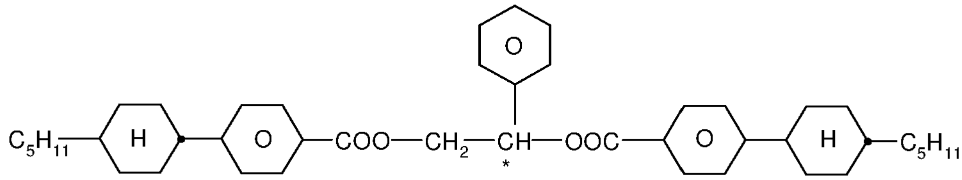

**R/S-1011**

The LC media preferably comprise 0 to 10% by weight, in particular 0.01 to 5% by weight, particularly preferably 0.1 to 3% by weight, of dopants. The LC media preferably comprise one or more dopants selected from the group consisting of compounds from Table B.

Table C

Table C shows possible stabilizers which can be added to the LC media according to the invention. Therein n denotes an integer from 1 to 12, preferably 1, 2, 3, 4, 5, 6, 7 or 8, and terminal methyl groups are not shown

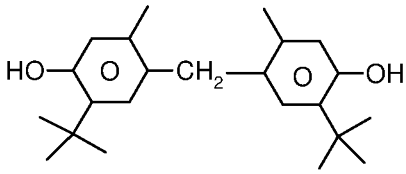

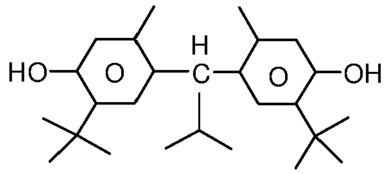

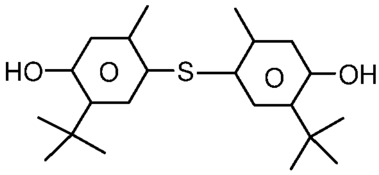

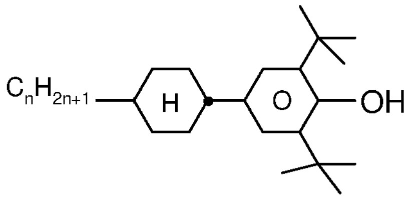

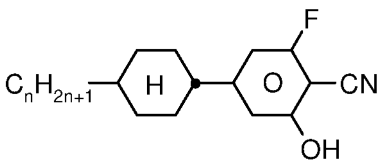

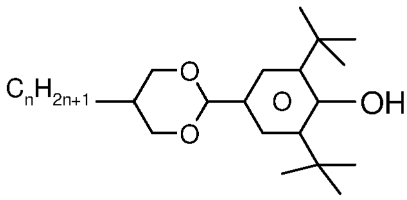

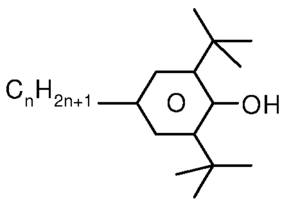

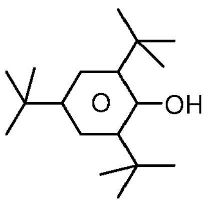

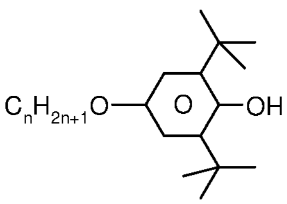

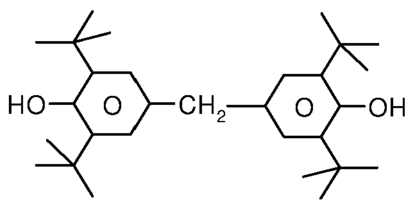

(continued)

Table C shows possible stabilizers which can be added to the LC media according to the invention. Therein n denotes an integer from 1 to 12, preferably 1, 2, 3, 4, 5, 6, 7 or 8, and terminal methyl groups are not shown

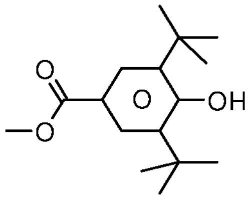

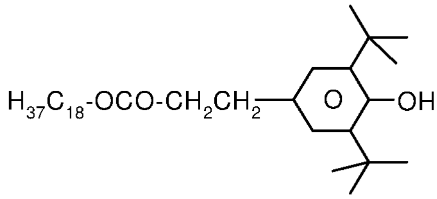

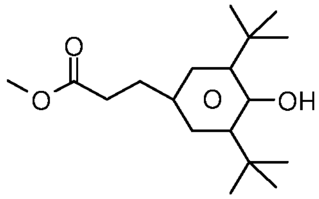

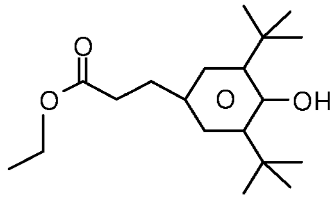

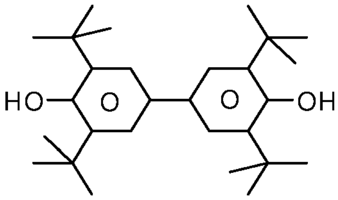

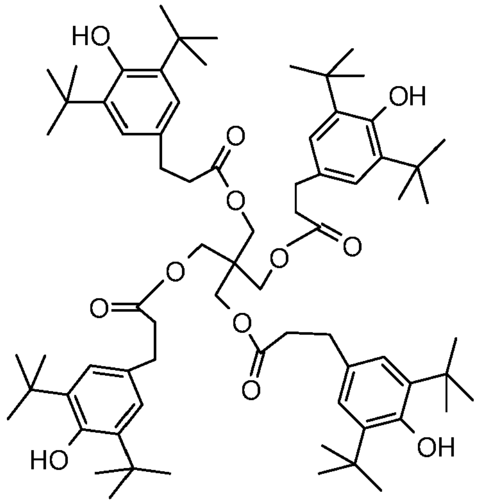

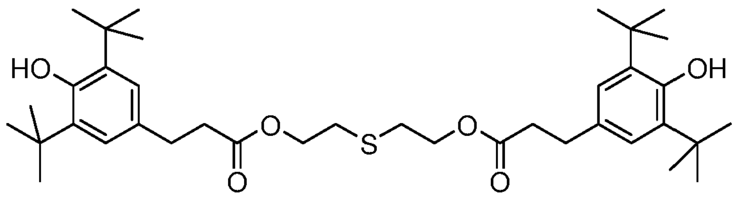

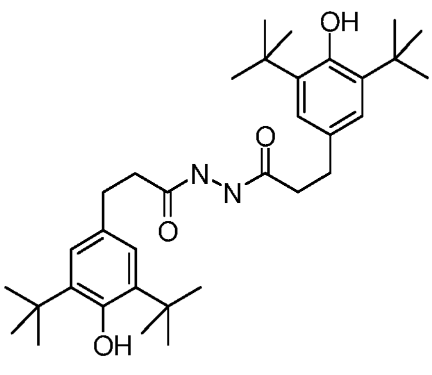

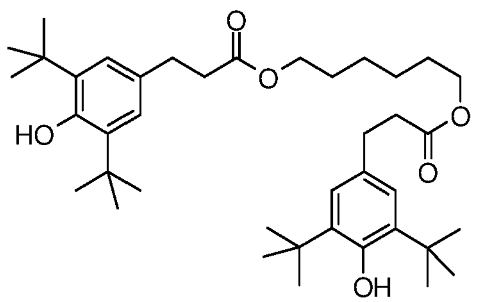

(continued)

Table C shows possible stabilizers which can be added to the LC media according to the invention. Therein n denotes an integer from 1 to 12, preferably 1, 2, 3, 4, 5, 6, 7 or 8, and terminal methyl groups are not shown

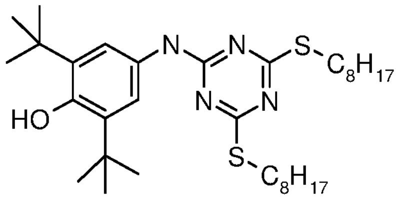

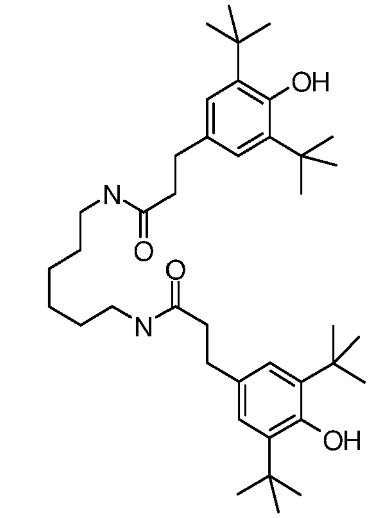

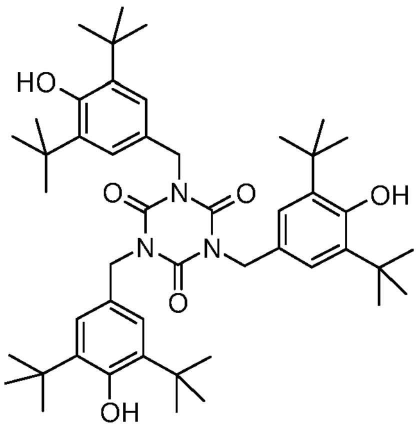

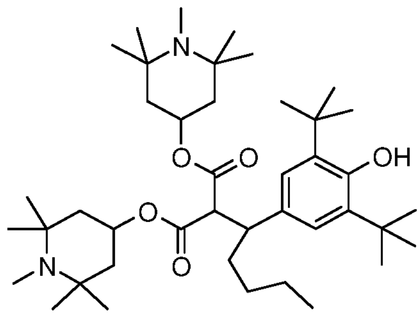

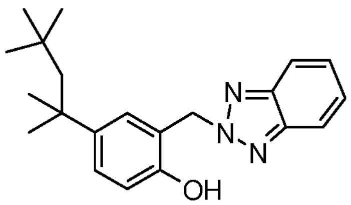

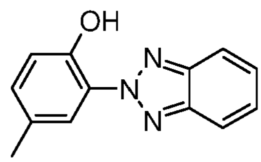

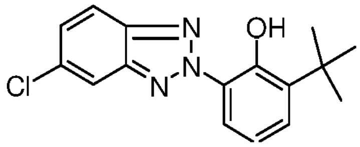

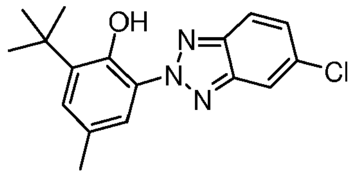

(continued)

Table C shows possible stabilizers which can be added to the LC media according to the invention. Therein n denotes an integer from 1 to 12, preferably 1, 2, 3, 4, 5, 6, 7 or 8, and terminal methyl groups are not shown

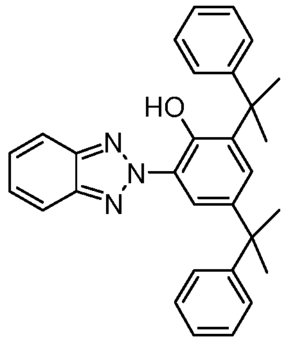

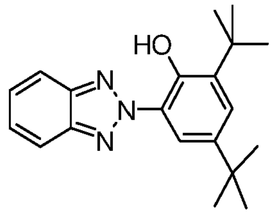

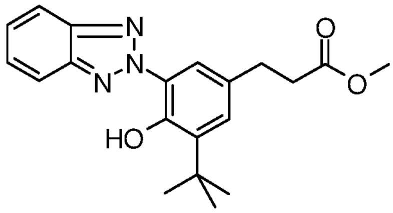

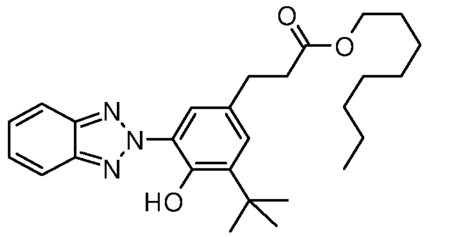

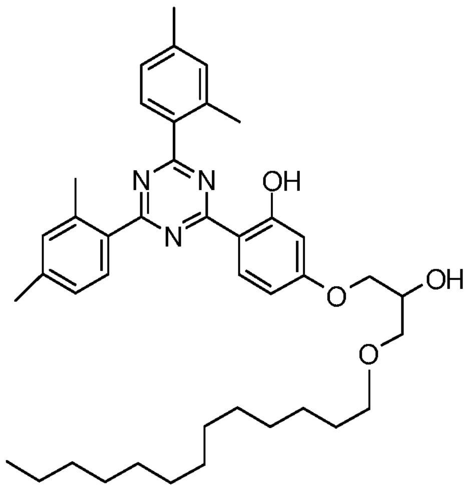

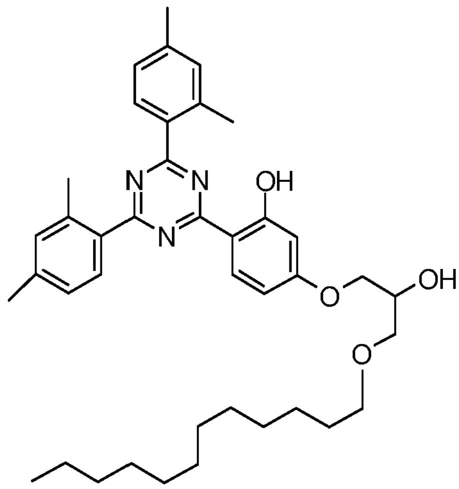

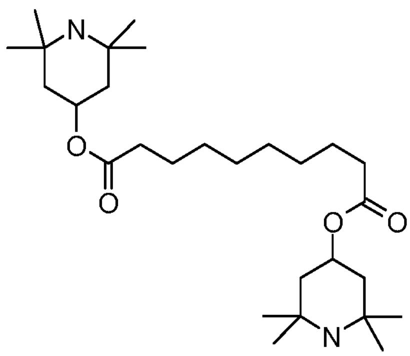

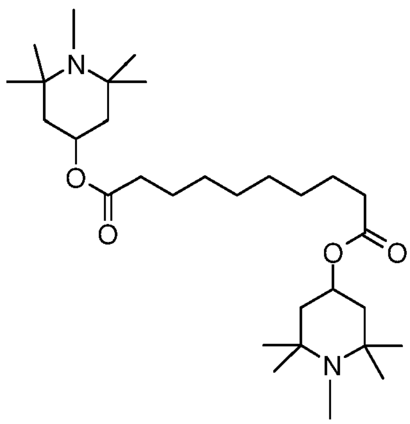

(continued)

Table C shows possible stabilizers which can be added to the LC media according to the invention. Therein n denotes an integer from 1 to 12, preferably 1, 2, 3, 4, 5, 6, 7 or 8, and terminal methyl groups are not shown

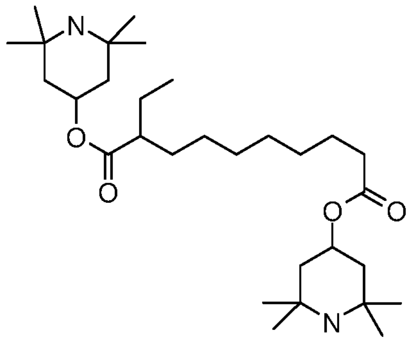

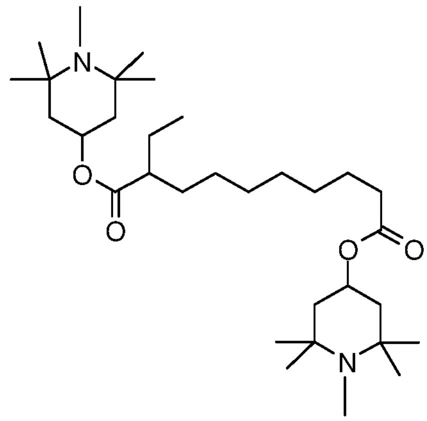

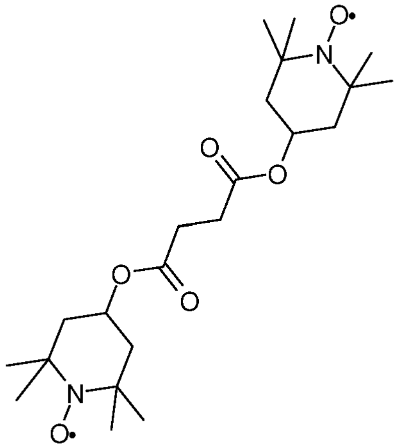

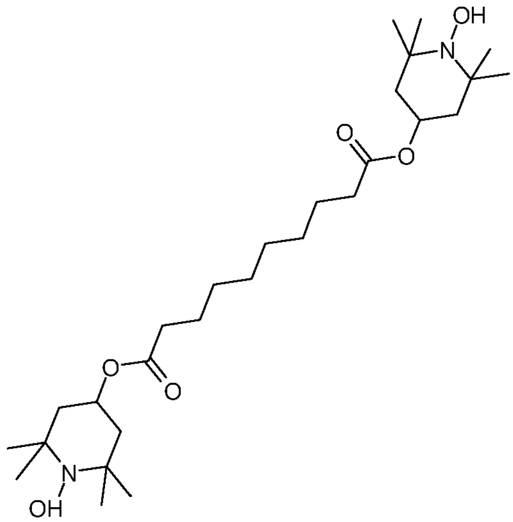

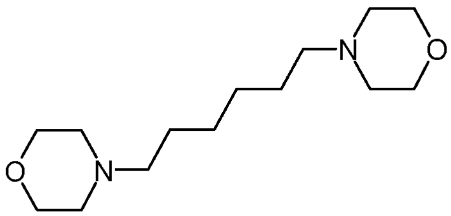

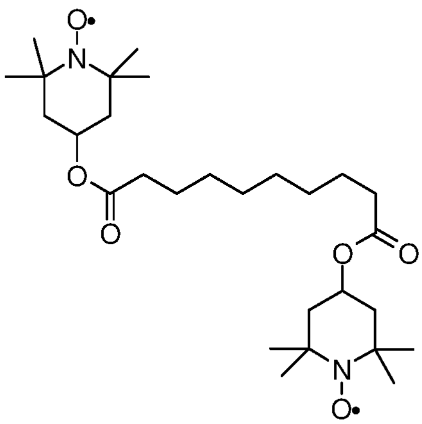

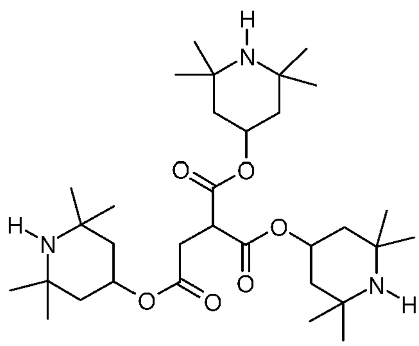

(continued)

Table C shows possible stabilizers which can be added to the LC media according to the invention. Therein n denotes an integer from 1 to 12, preferably 1, 2, 3, 4, 5, 6, 7 or 8, and terminal methyl groups are not shown

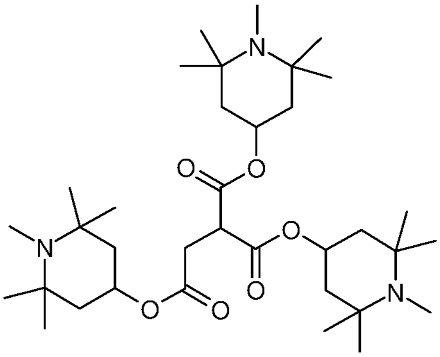

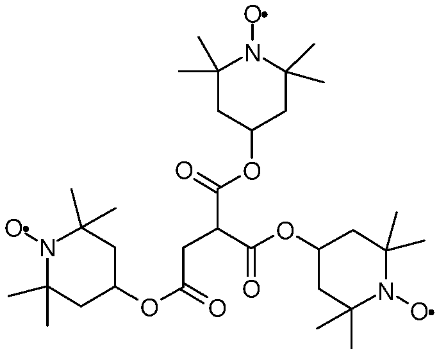

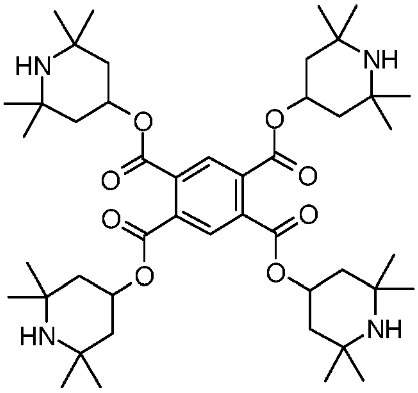

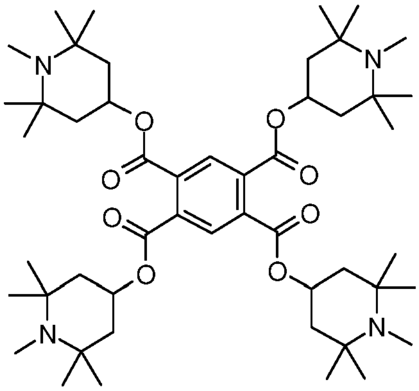

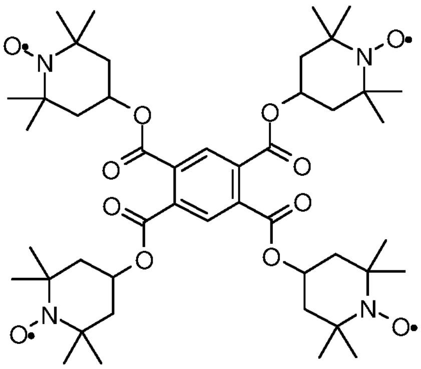

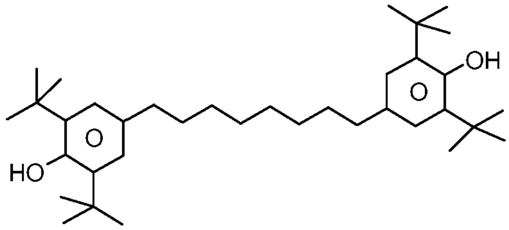

The LC media preferably comprise 0 to 10% by weight, in particular 1 ppm to 5% by weight, particularly preferably 1 ppm to 1% by weight, of stabilizers. The LC media preferably comprise one or more stabilizers selected from the group consisting of compounds from Table C.

<u>**Table D**</u>

Table D shows illustrative reactive mesogenic compounds which can be used in the LC media in accordance with the present invention.

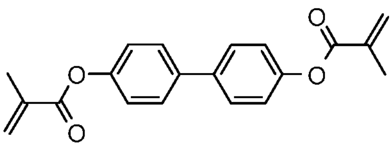

RM-1

(continued)

Table D shows illustrative reactive mesogenic compounds which can be used in the LC media in accordance with the present invention.

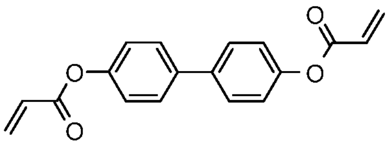

RM-2

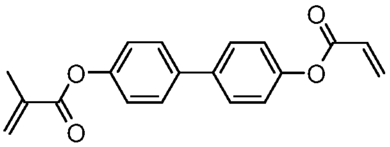

RM-3

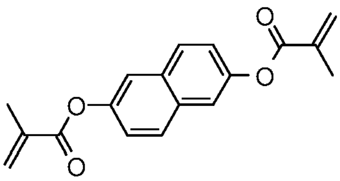

RM-4

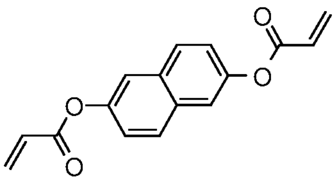

RM-5

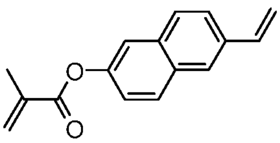

RM-6

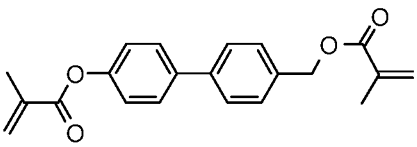

RM-7

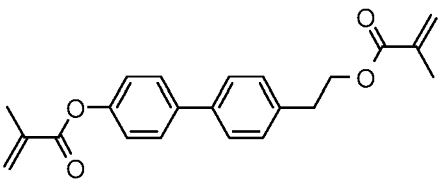

RM-8

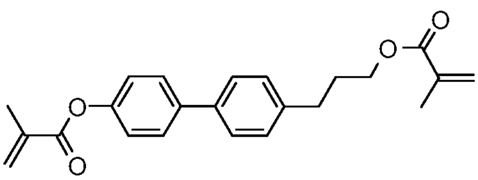

RM-9

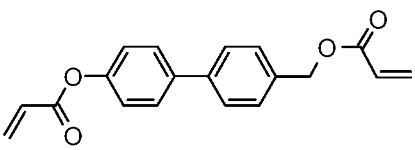

RM-10

(continued)

Table D shows illustrative reactive mesogenic compounds which can be used in the LC media in accordance with the present invention.

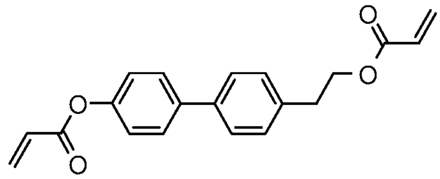

RM-11

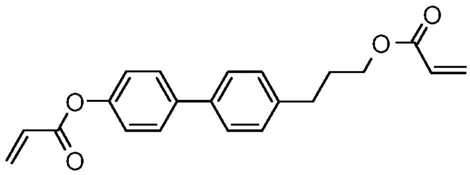

RM-12

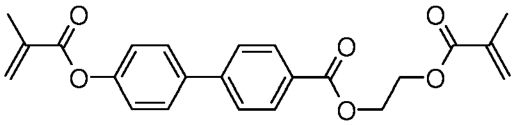

RM-13

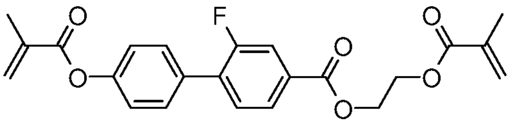

RM-14

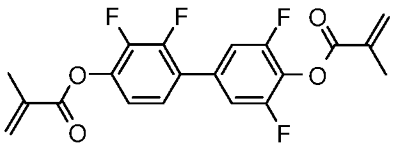

RM-15

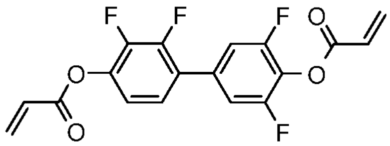

RM-16

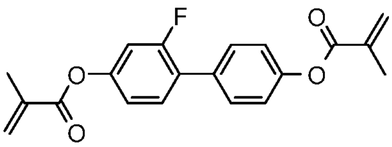

RM-17

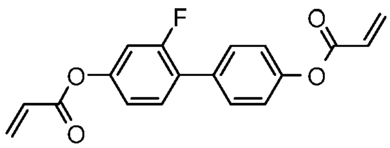

RM-18

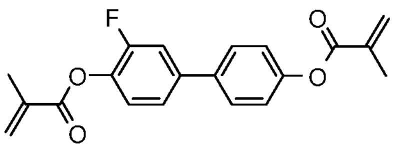

RM-19

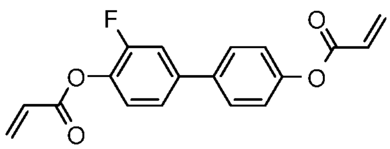

RM-20

(continued)

Table D shows illustrative reactive mesogenic compounds which can be used in the LC media in accordance with the present invention.

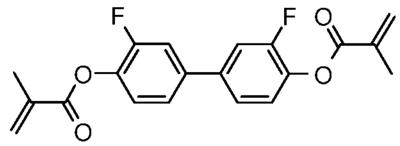
RM-21

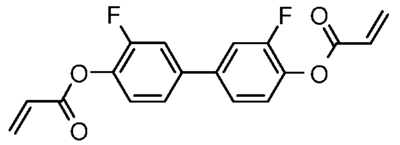
RM-22

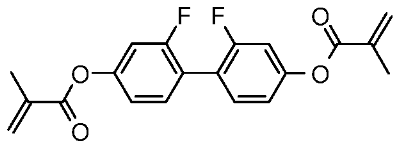
RM-23

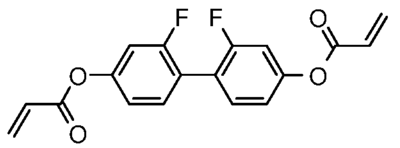
RM-24

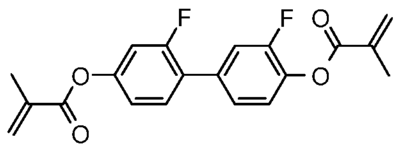
RM-25

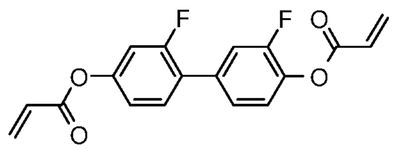
RM-26

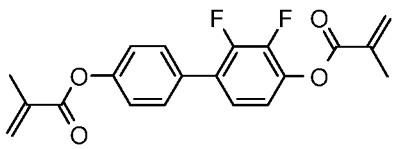
RM-27

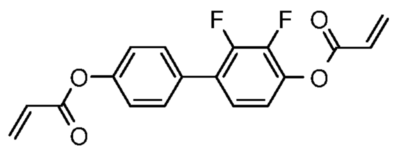
RM-28

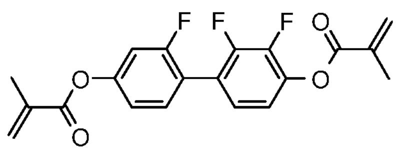
RM-29

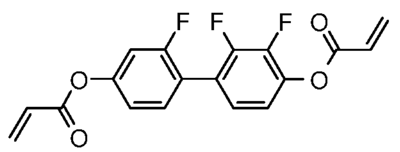
RM-30

(continued)

Table D shows illustrative reactive mesogenic compounds which can be used in the LC media in accordance with the present invention.

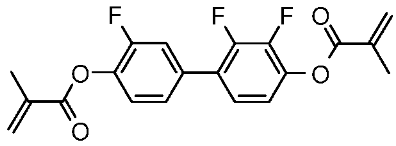

RM-31

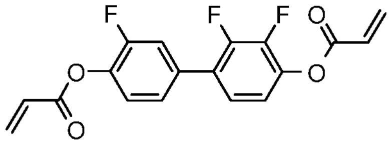

RM-32

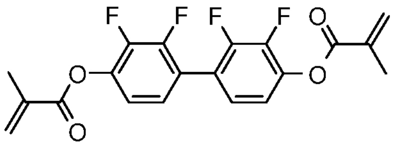

RM-33

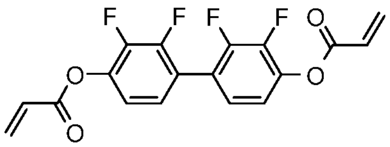

RM-34

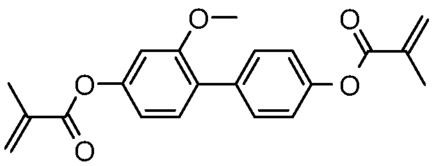

RM-35

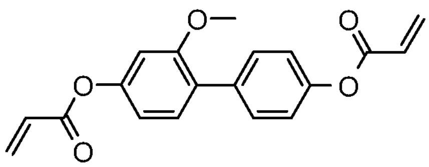

RM-36

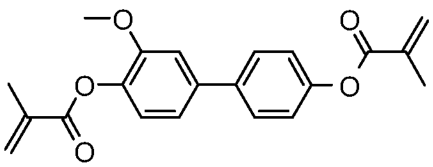

RM-37

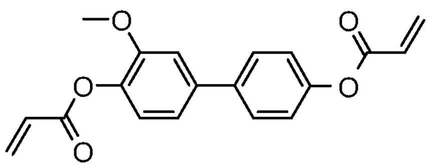

RM-38

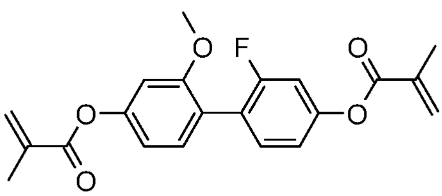

RM-39

(continued)

Table D shows illustrative reactive mesogenic compounds which can be used in the LC media in accordance with the present invention.

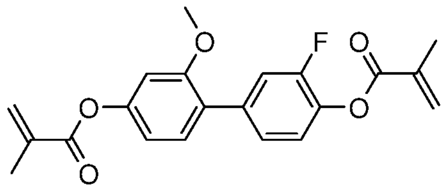

RM-40

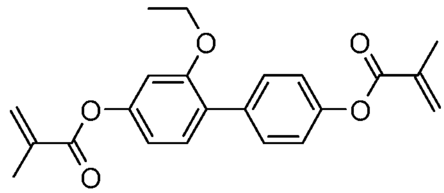

RM-41

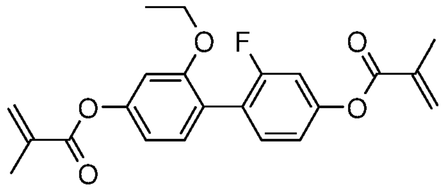

RM-42

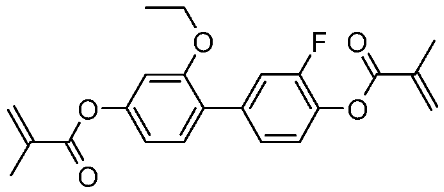

RM-43

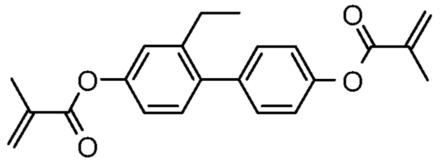

RM-44

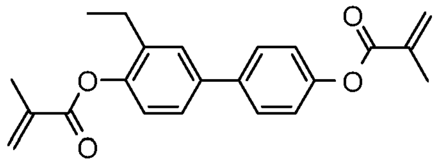

RM-45

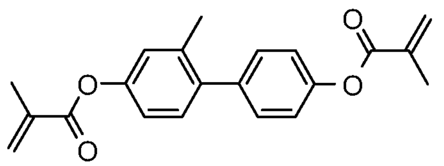

RM-46

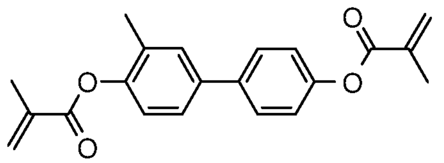

RM-47

(continued)

Table D shows illustrative reactive mesogenic compounds which can be used in the LC media in accordance with the present invention.

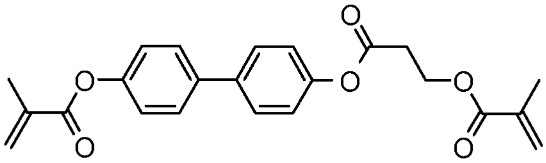

RM-48

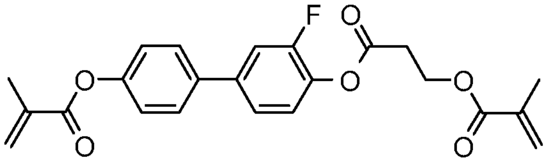

RM-49

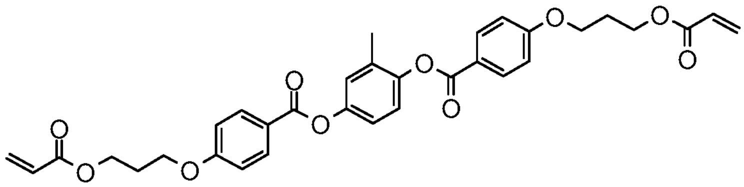

RM-50

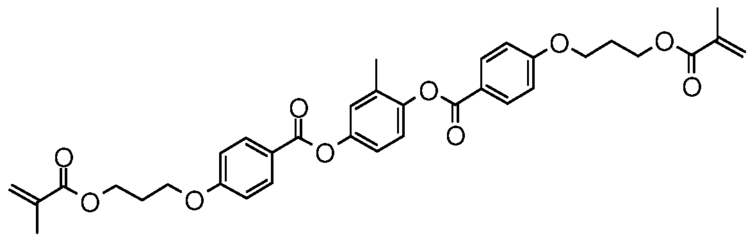

RM-51

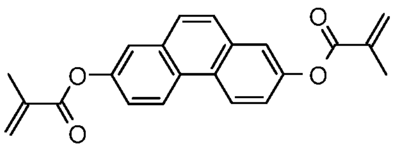

RM-52

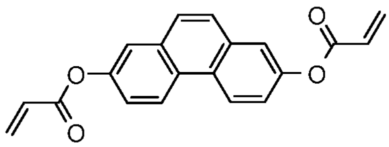

RM-53

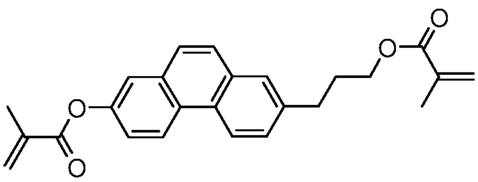

RM-54

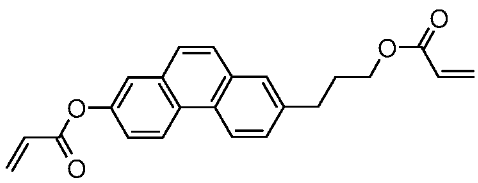

RM-55

(continued)

Table D shows illustrative reactive mesogenic compounds which can be used in the LC media in accordance with the present invention.

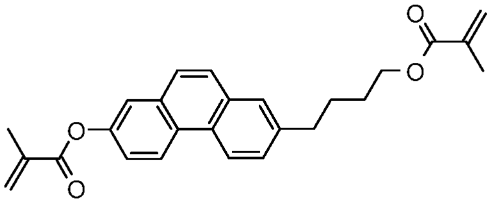

RM-56

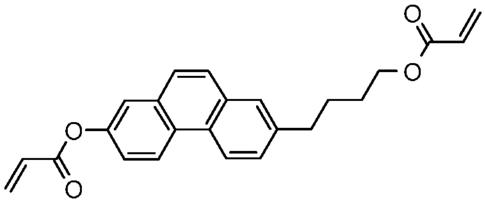

RM-57

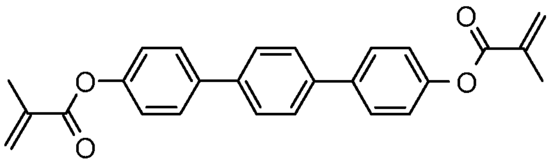

RM-58

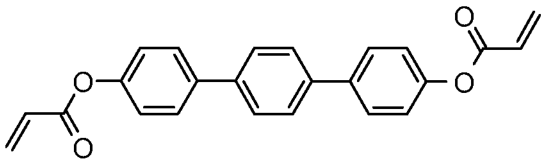

RM-59

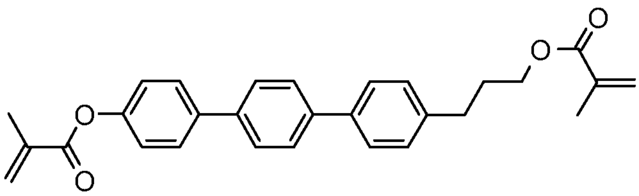

RM-60

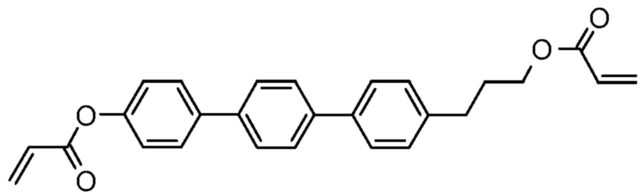

RM-61

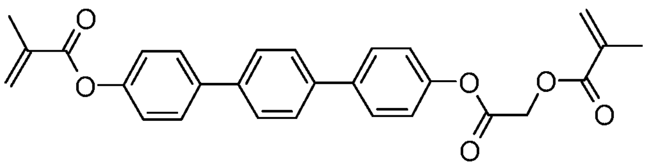

RM-62

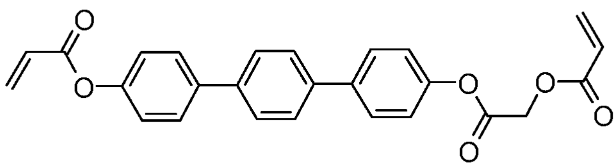

RM-63

(continued)

Table D shows illustrative reactive mesogenic compounds which can be used in the LC media in accordance with the present invention.

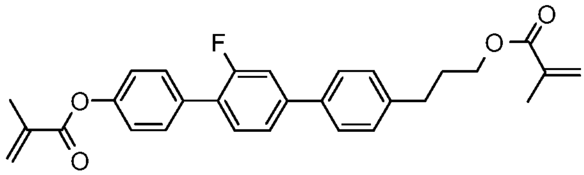
RM-64

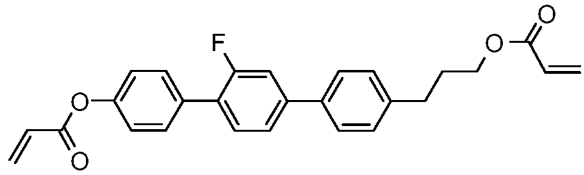
RM-65

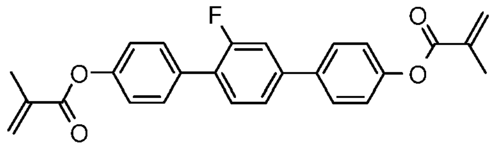
RM-66

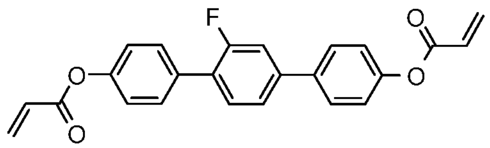
RM-67

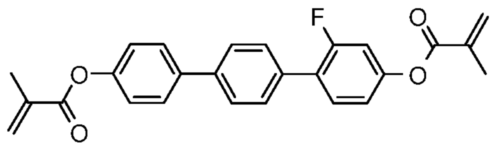
RM-68

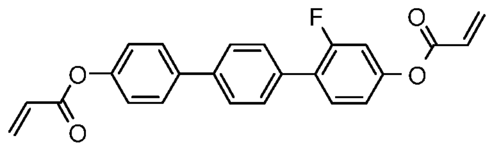
RM-69

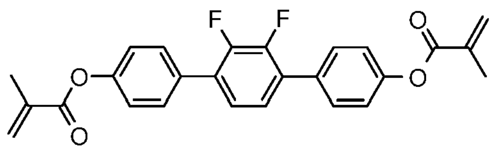
RM-70

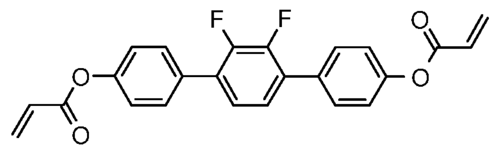
RM-71

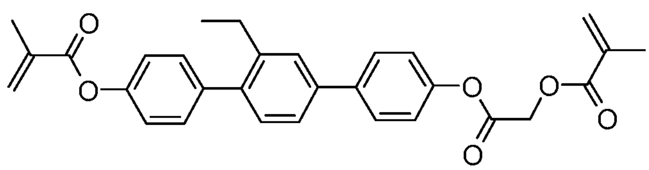
RM-72

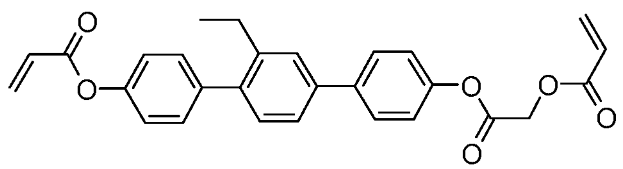
RM-73

(continued)

Table D shows illustrative reactive mesogenic compounds which can be used in the LC media in accordance with the present invention.

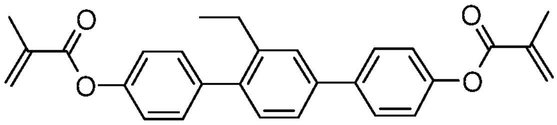

RM-74

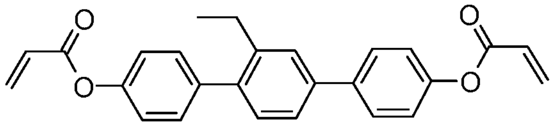

RM-75

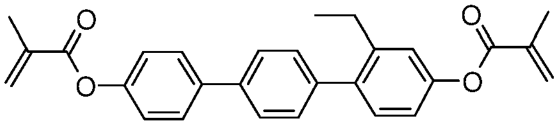

RM-76

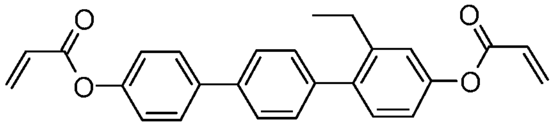

RM-77

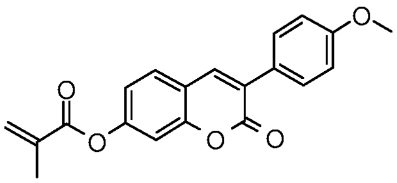

RM-78

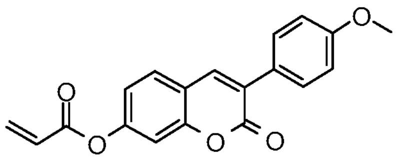

RM-79

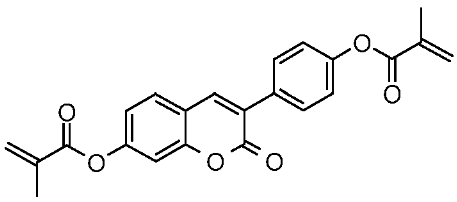

RM-80

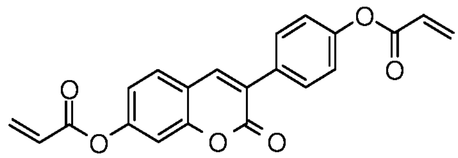

RM-81

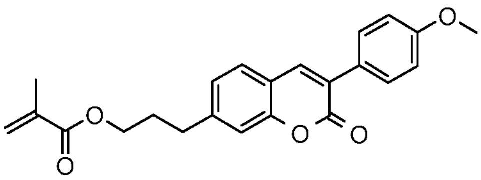

RM-82

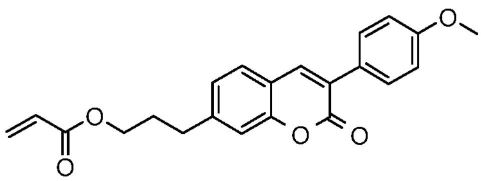

RM-83

(continued)

Table D shows illustrative reactive mesogenic compounds which can be used in the LC media in accordance with the present invention.

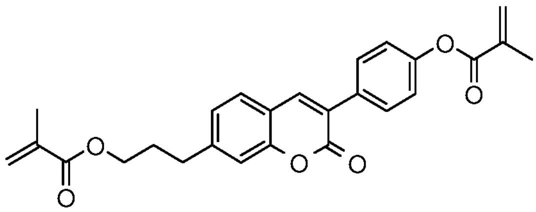

RM-84

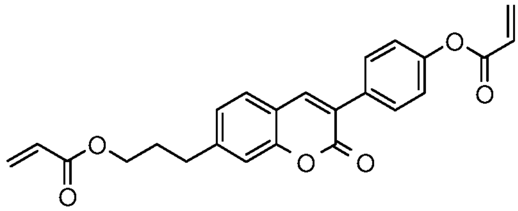

RM-85

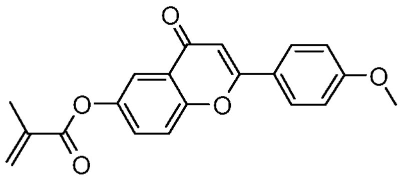

RM-86

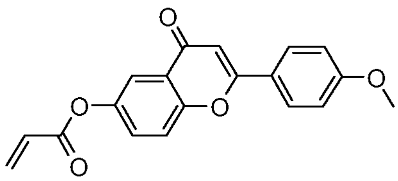

RM-87

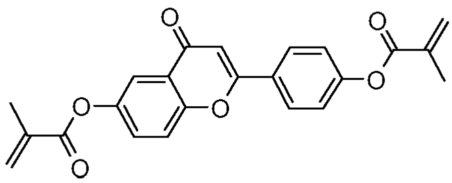

RM-88

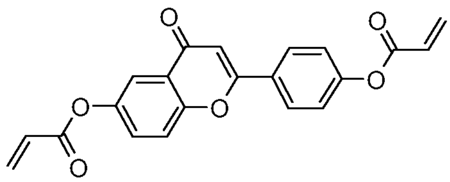

RM-89

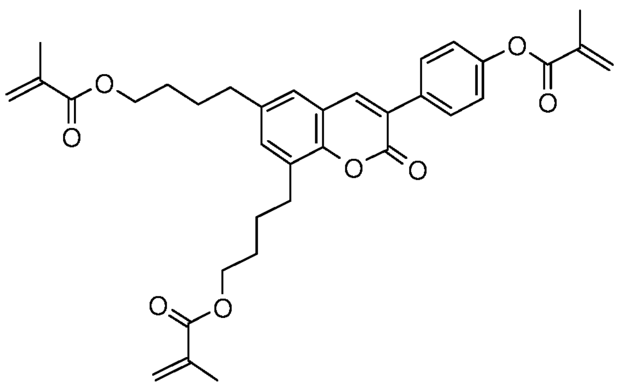

RM-90

(continued)

Table D shows illustrative reactive mesogenic compounds which can be used in the LC media in accordance with the present invention.

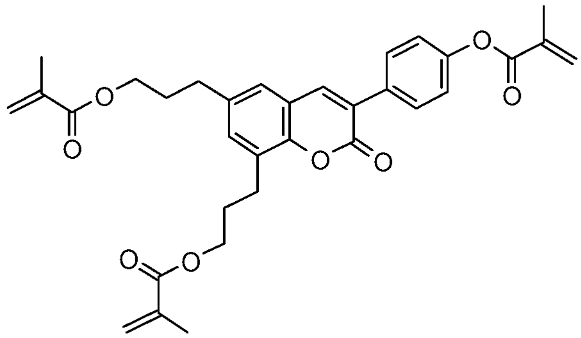

RM-91

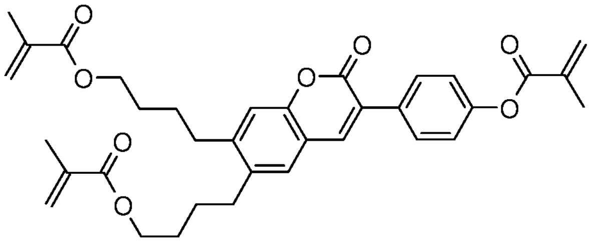

RM-92

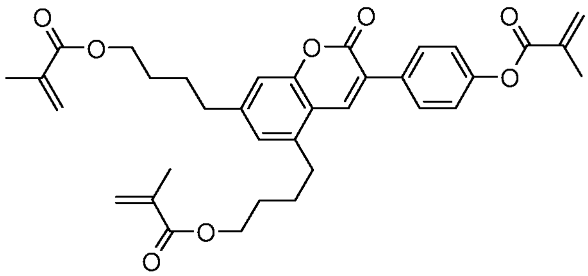

RM-93

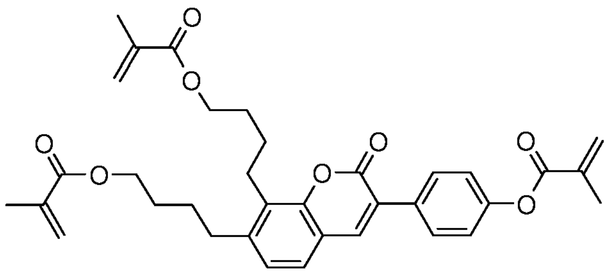

RM-94

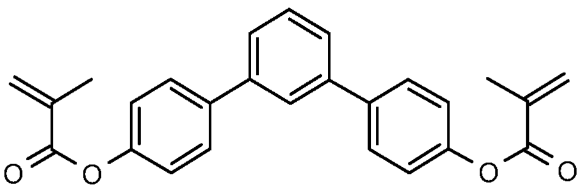

RM-95

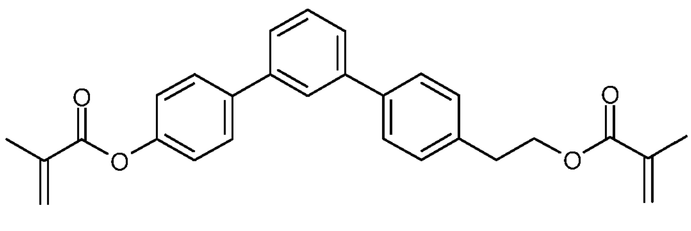

RM-96

(continued)

Table D shows illustrative reactive mesogenic compounds which can be used in the LC media in accordance with the present invention.

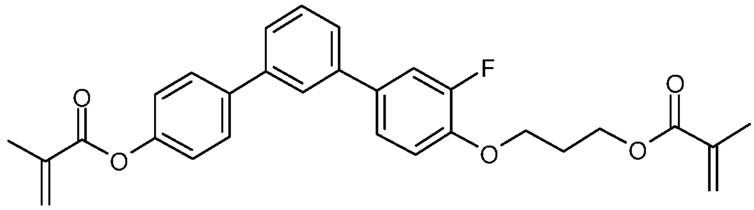

RM-97

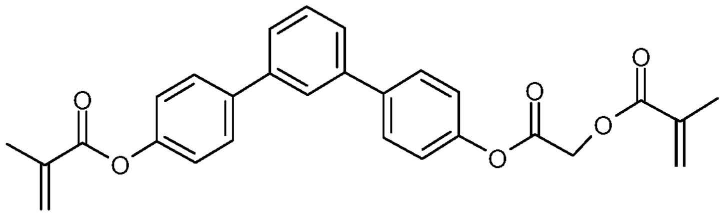

RM-98

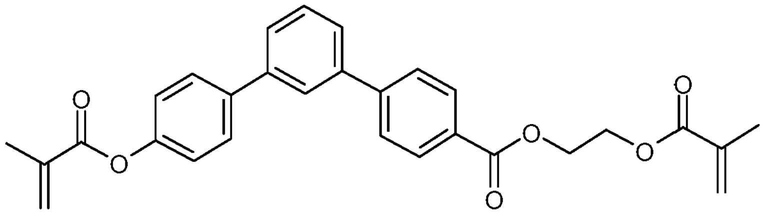

RM-99

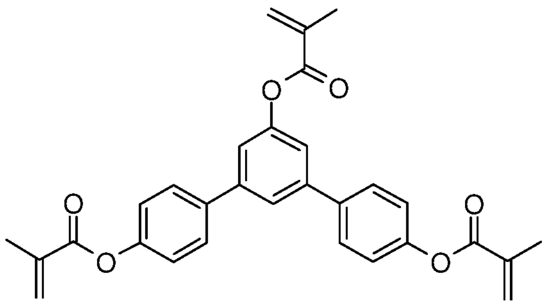

RM-100

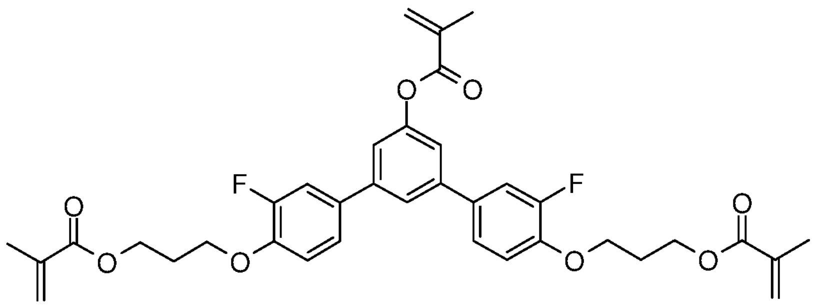

RM-101

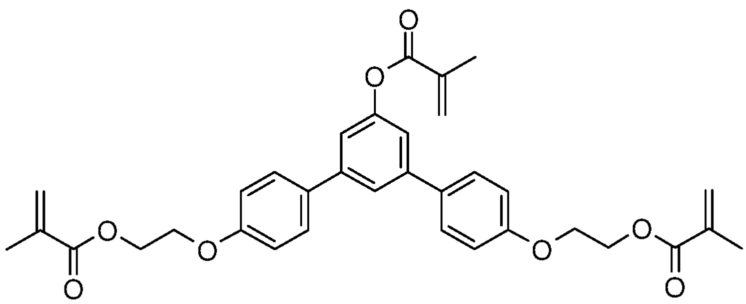

RM-102

(continued)

Table D shows illustrative reactive mesogenic compounds which can be used in the LC media in accordance with the present invention.

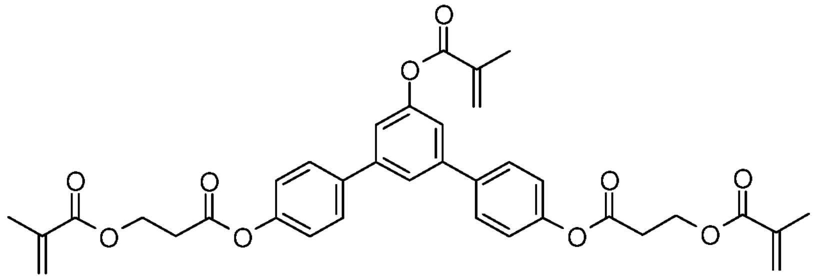

RM-103

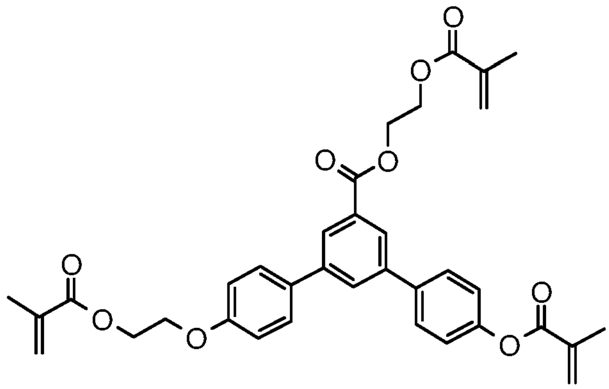

RM-104

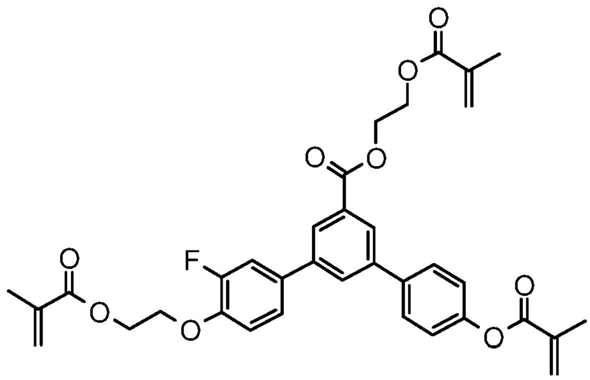

RM-105

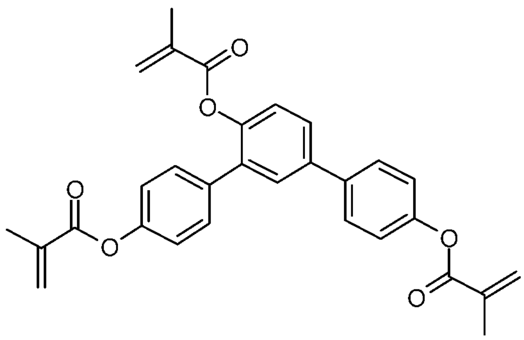

RM-106

(continued)

Table D shows illustrative reactive mesogenic compounds which can be used in the LC media in accordance with the present invention.

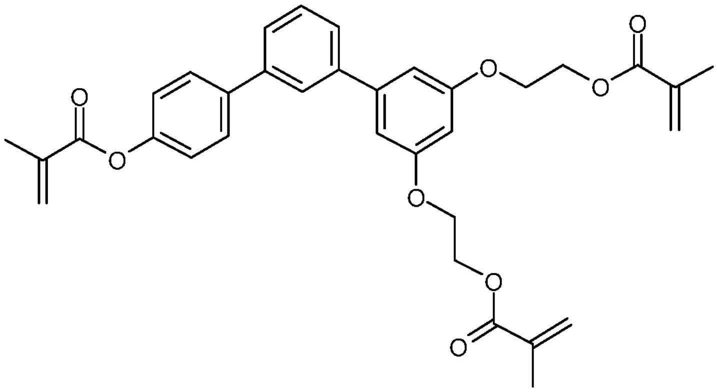

RM-107

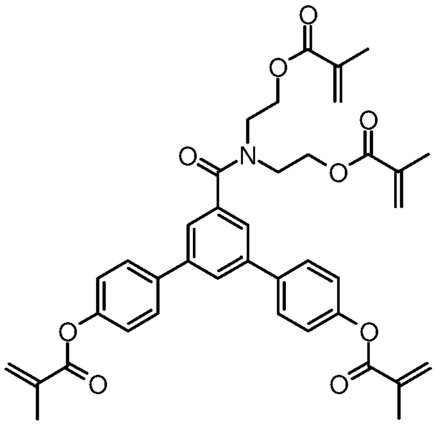

RM-108

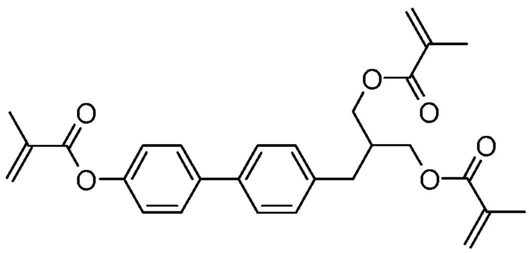

RM-109

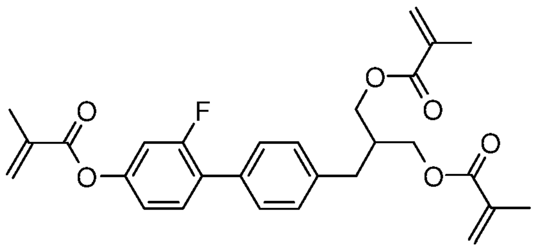

RM-110

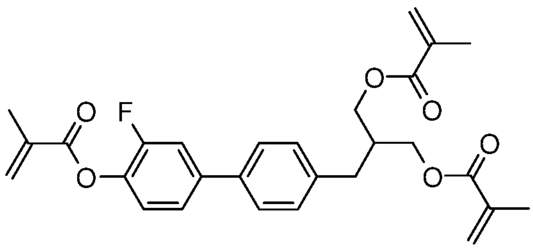

RM-111

(continued)

Table D shows illustrative reactive mesogenic compounds which can be used in the LC media in accordance with the present invention.

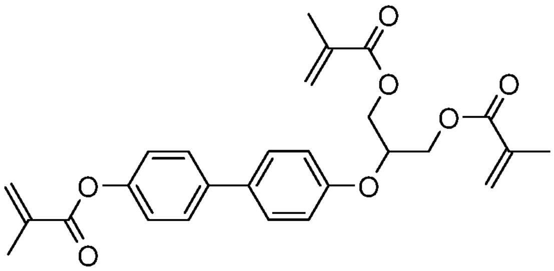

RM-112

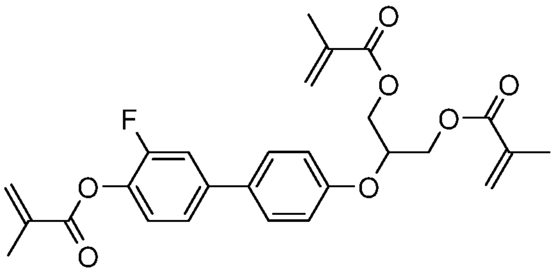

RM-113

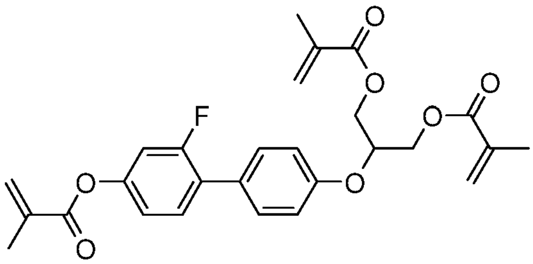

RM-114

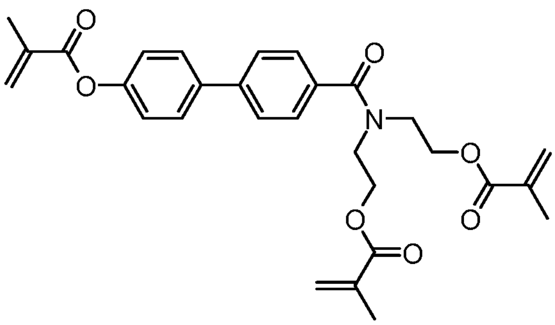

RM-115

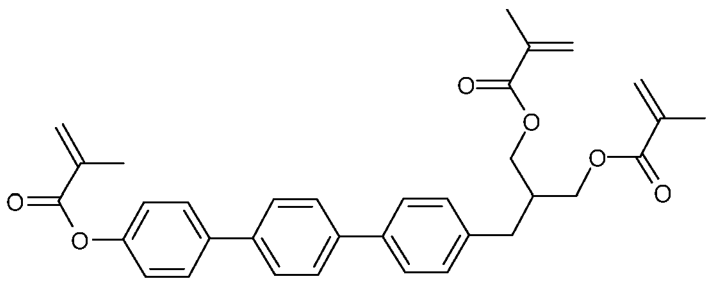

RM-116

(continued)

Table D shows illustrative reactive mesogenic compounds which can be used in the LC media in accordance with the present invention.

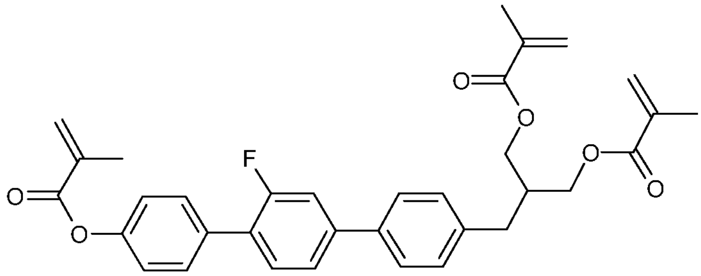

RM-117

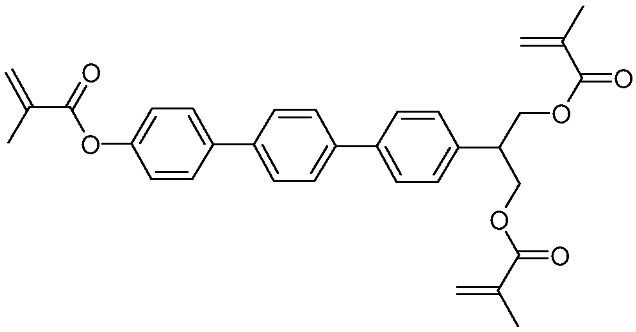

RM-118

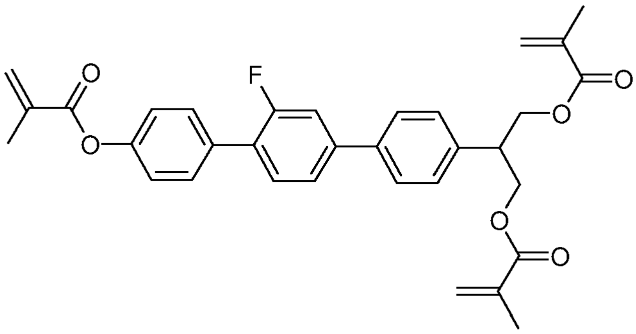

RM-119

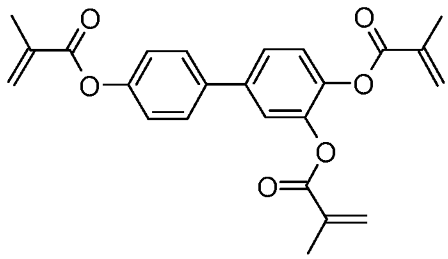

RM-120

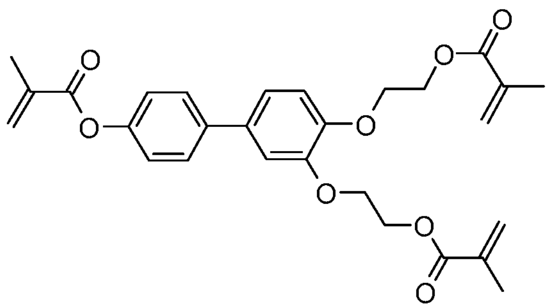

RM-121

(continued)

Table D shows illustrative reactive mesogenic compounds which can be used in the LC media in accordance with the present invention.

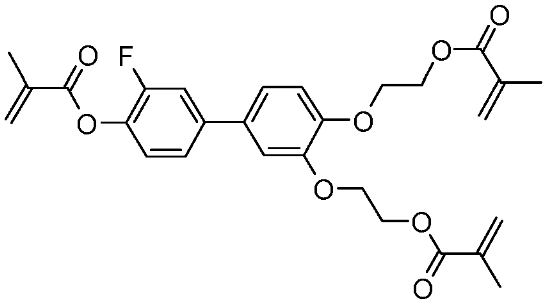

RM-122

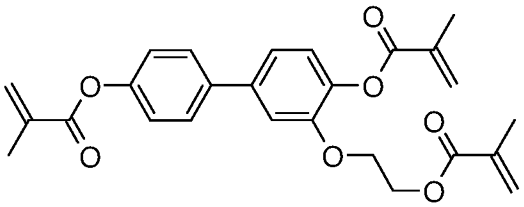

RM-123

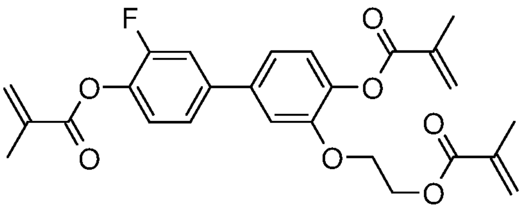

RM-124

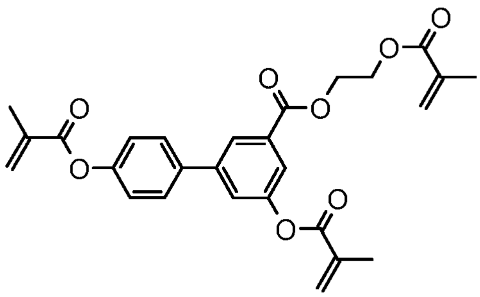

RM-125

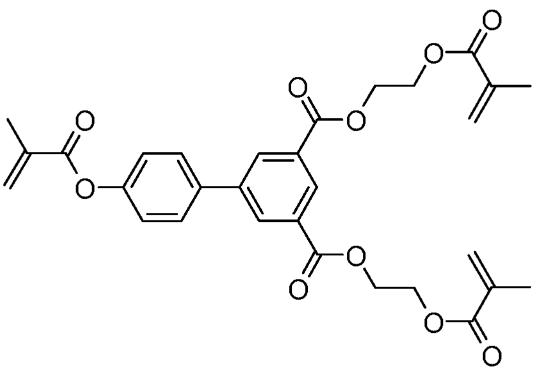

RM-126

(continued)

Table D shows illustrative reactive mesogenic compounds which can be used in the LC media in accordance with the present invention.

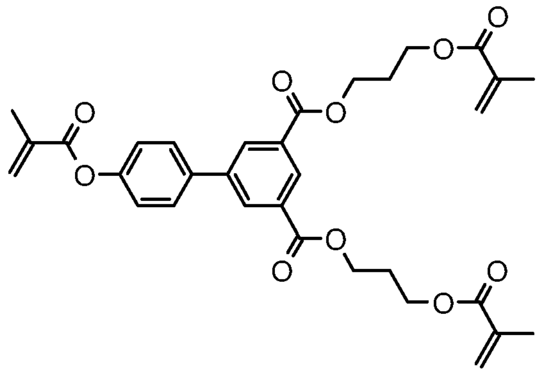

RM-127

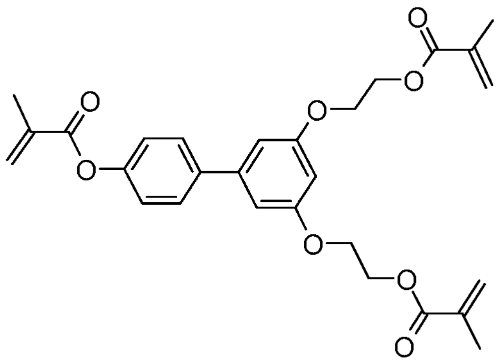

RM-128

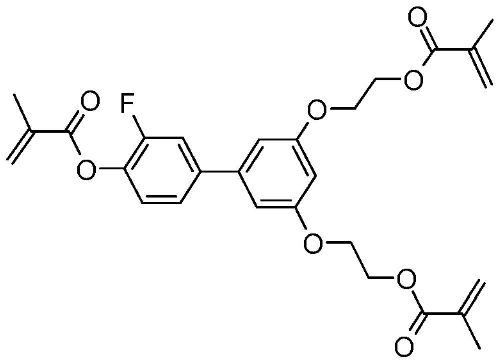

RM-129

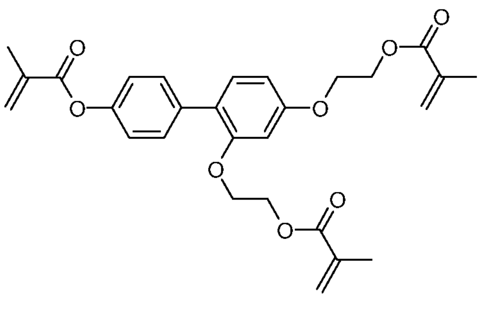

RM-130

(continued)

Table D shows illustrative reactive mesogenic compounds which can be used in the LC media in accordance with the present invention.

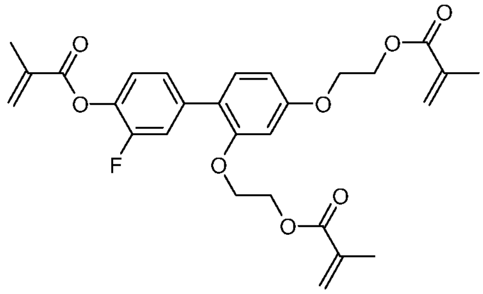

RM-131

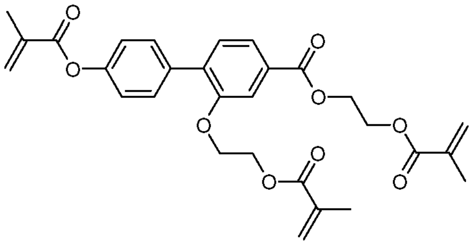

RM-132

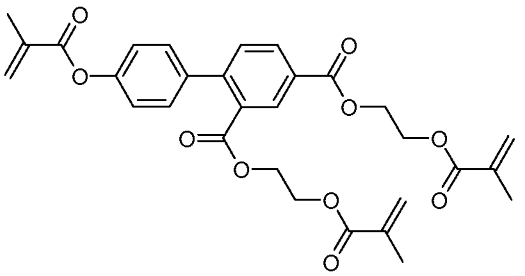

RM-133

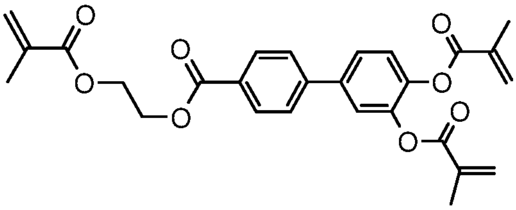

RM-134

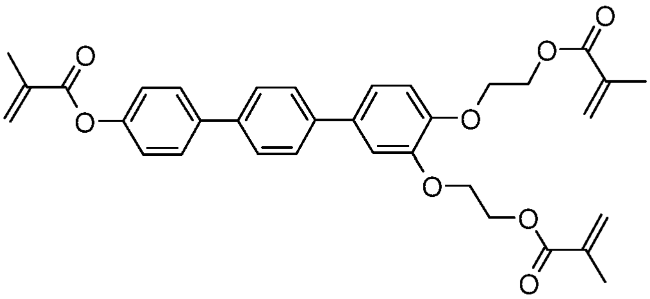

RM-135

(continued)

Table D shows illustrative reactive mesogenic compounds which can be used in the LC media in accordance with the present invention.

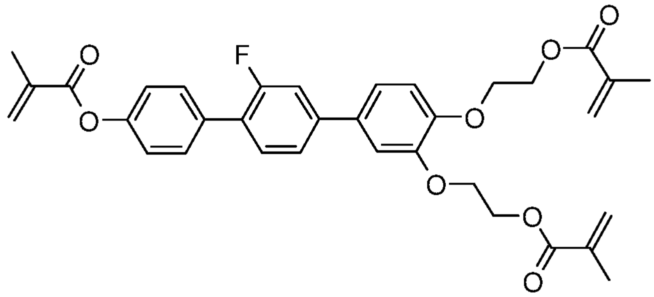

RM-136

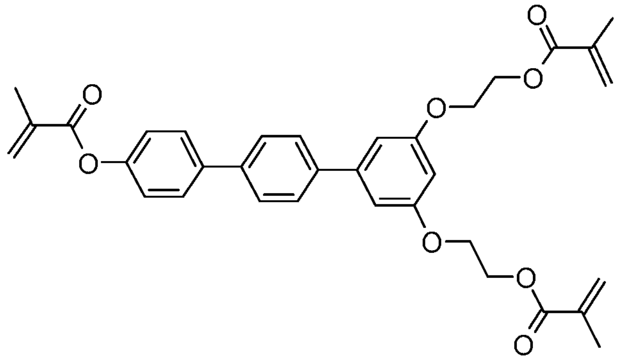

RM-137

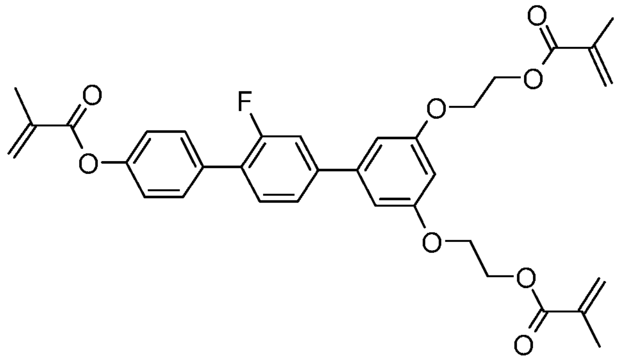

RM-138

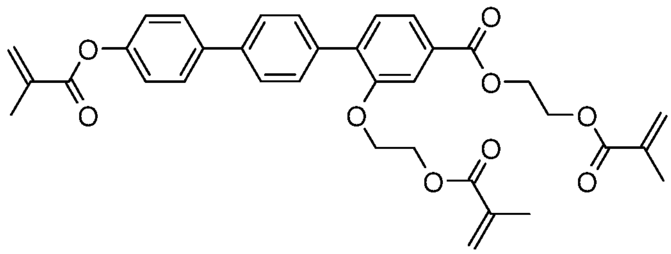

RM-139

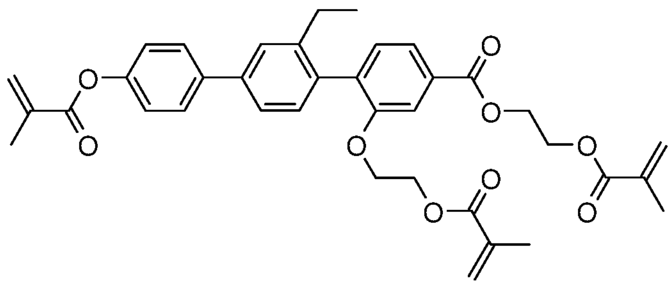

RM-140

(continued)

Table D shows illustrative reactive mesogenic compounds which can be used in the LC media in accordance with the present invention.

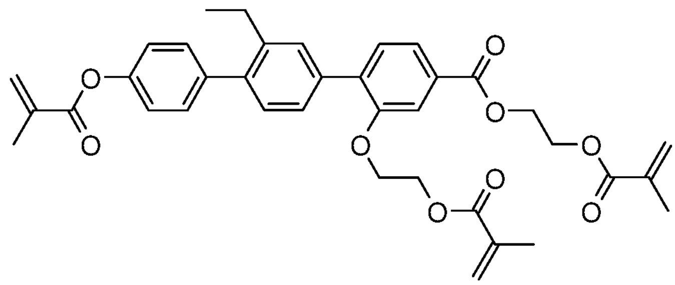

RM-141

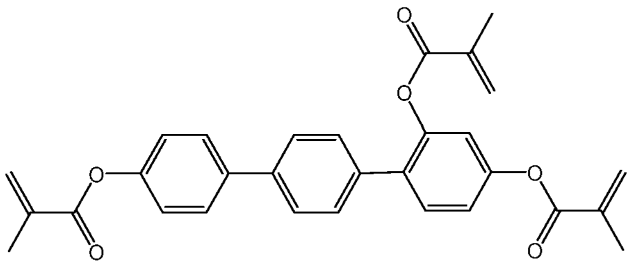

RM-142

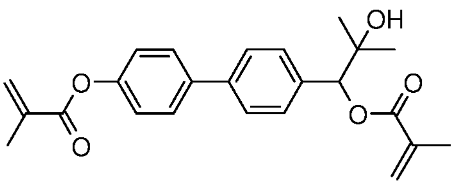

RM-143

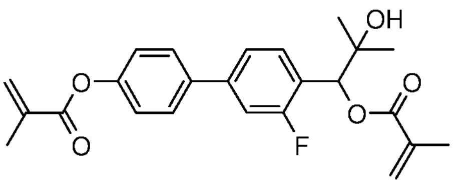

RM-144

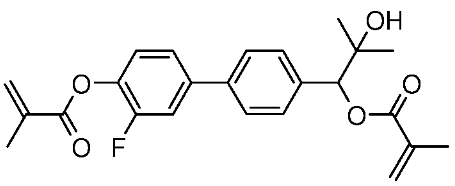

RM-145

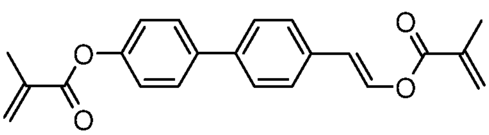

RM-146

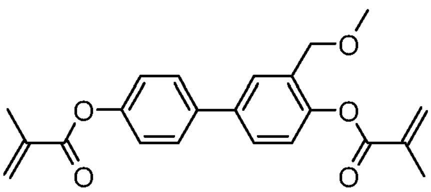

RM-147

(continued)

Table D shows illustrative reactive mesogenic compounds which can be used in the LC media in accordance with the present invention.

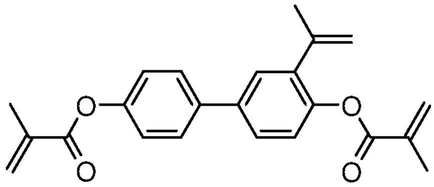

RM-148

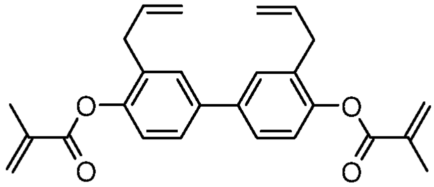

RM-149

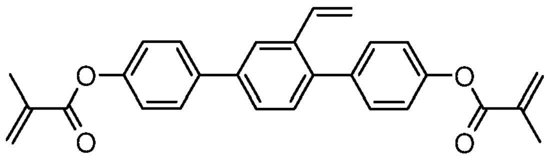

RM-150

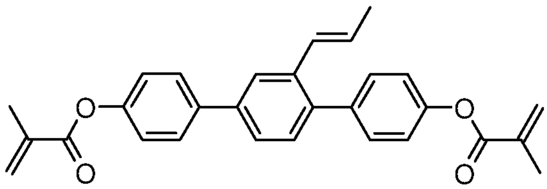

RM-151

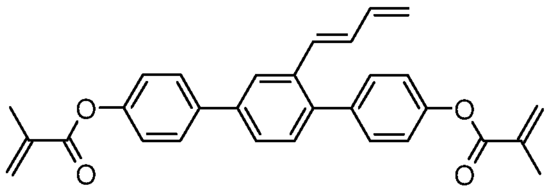

RM-152

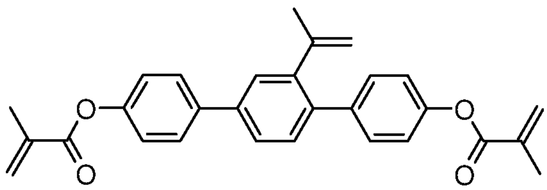

RM-153

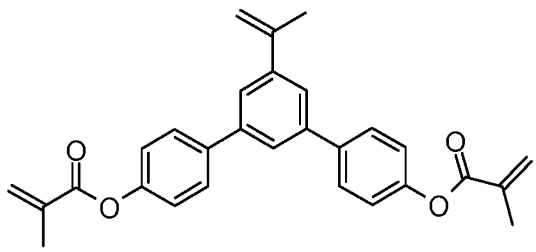

RM-154

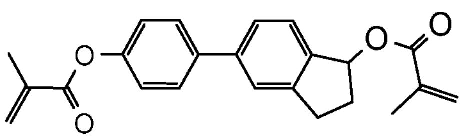

RM-155

(continued)

Table D shows illustrative reactive mesogenic compounds which can be used in the LC media in accordance with the present invention.

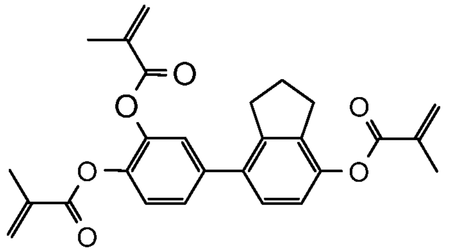

RM-156

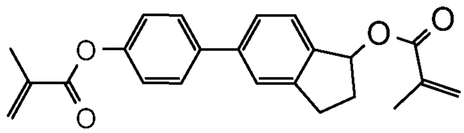

RM-157

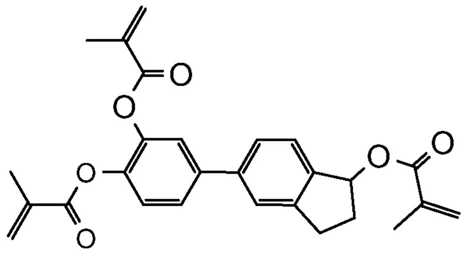

RM-158

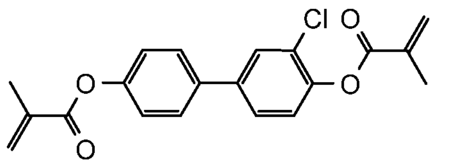

RM-159

In a preferred embodiment, the mixtures according to the invention comprise one or more polymerizable compounds, preferably selected from the polymerizable compounds of the formulae RM-1 to RM-144. Of these, compounds RM-1, RM-4, RM-8, RM-17, RM-19, RM-35, RM-37, RM-39, RM-40, RM-41, RM-48, RM-52, RM-54, RM-57, RM-64, RM-74, RM-76, RM-88, RM-102, RM-103, RM-109, RM-117, RM-120, RM-121, RM-122, R-139, RM-142 and RM-146 to RM-154 are particularly preferred.

In another preferred embodiment, the mixtures according to the invention comprise one or more polymerizable compounds selected from the formulae RM-146 to RM-153, very preferably from the formulae RM-148 to RM-153.

Table E

Table E shows self-alignment additives for vertical alignment which can be used in LC media for SA-VA and SA-FFS displays according to the present invention together with the polymerizable compounds of formula I:

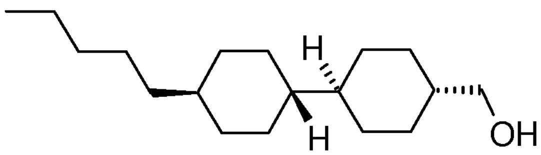

SA-1

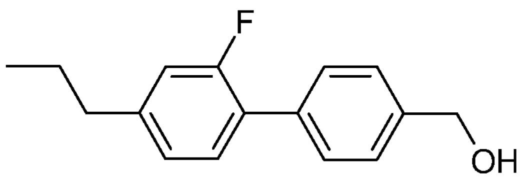

SA-2

(continued)

Table E shows self-alignment additives for vertical alignment which can be used in LC media for SA-VA and SA-FFS displays according to the present invention together with the polymerizable compounds of formula I:

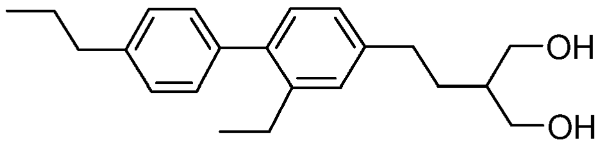

SA-3

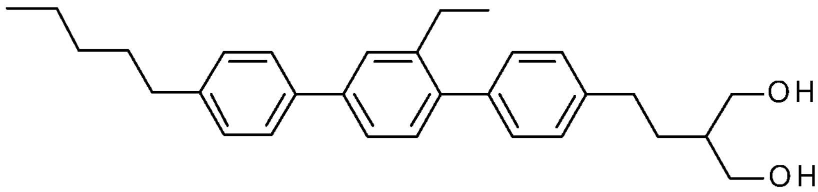

SA-4

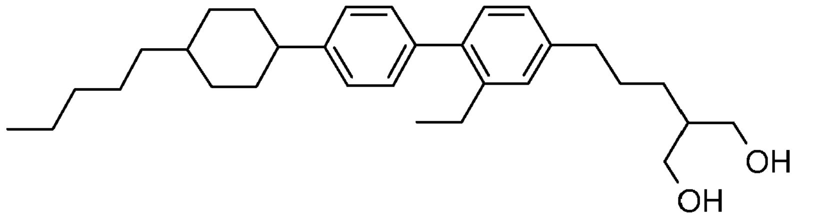

SA-5

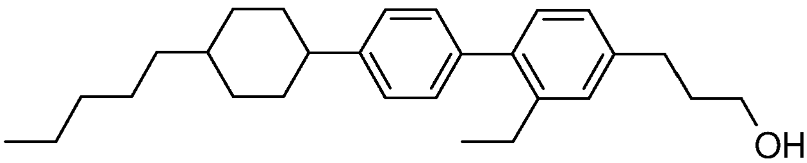

SA-6

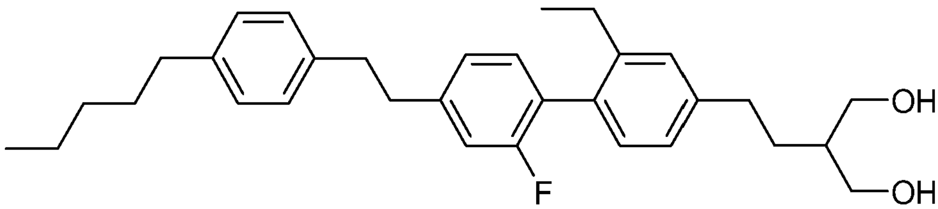

SA-7

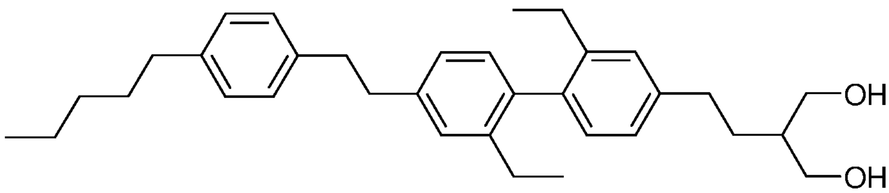

SA-8

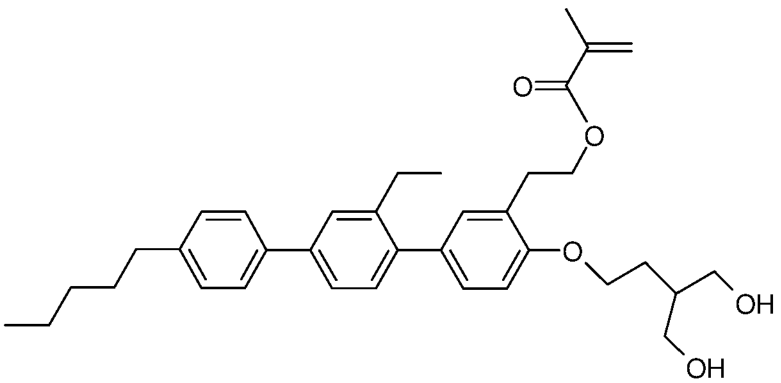

SA-9

(continued)

Table E shows self-alignment additives for vertical alignment which can be used in LC media for SA-VA and SA-FFS displays according to the present invention together with the polymerizable compounds of formula I:

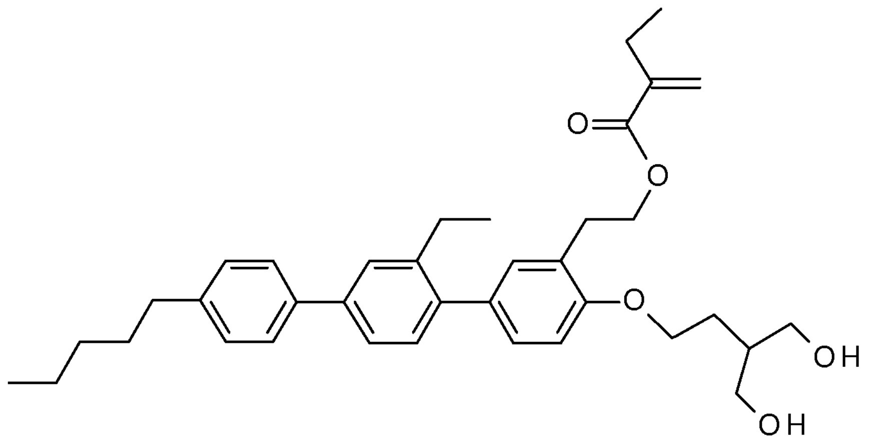

SA-10

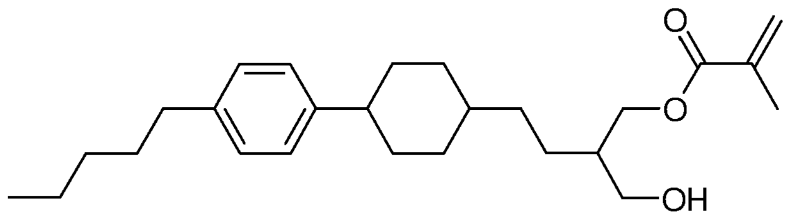

SA-11

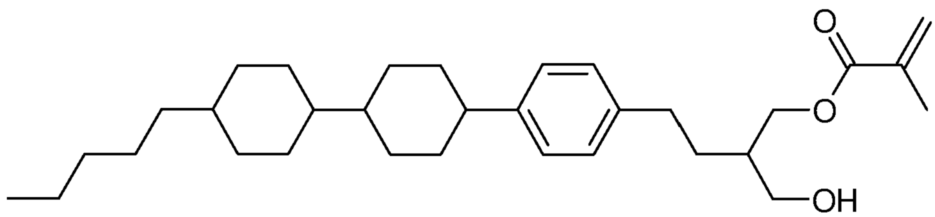

SA-12

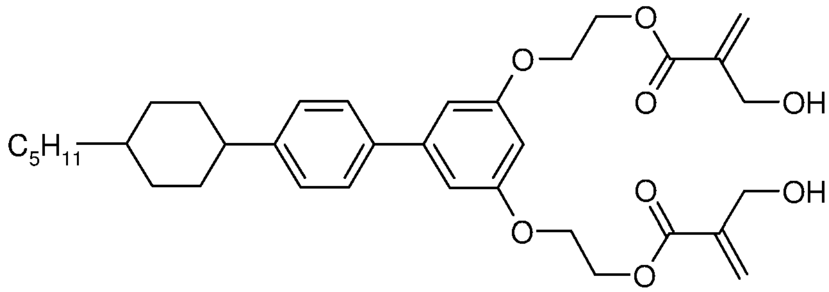

SA-13

(continued)

Table E shows self-alignment additives for vertical alignment which can be used in LC media for SA-VA and SA-FFS displays according to the present invention together with the polymerizable compounds of formula I:

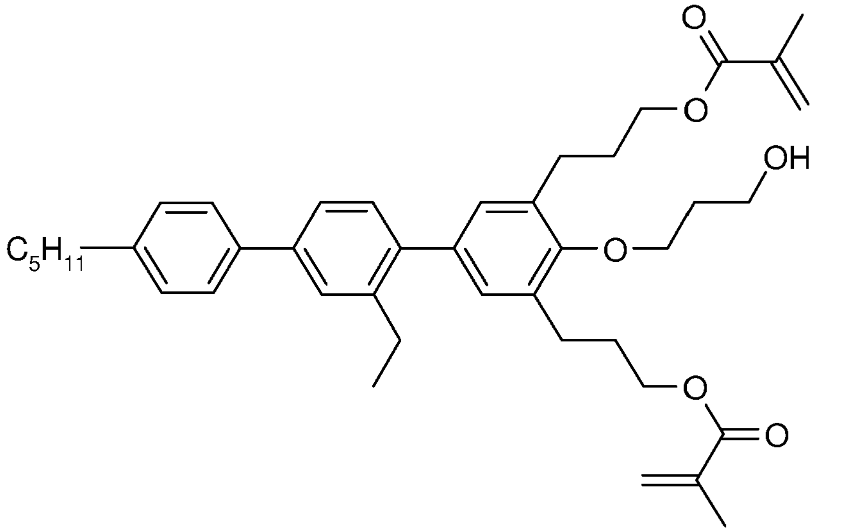

SA-14

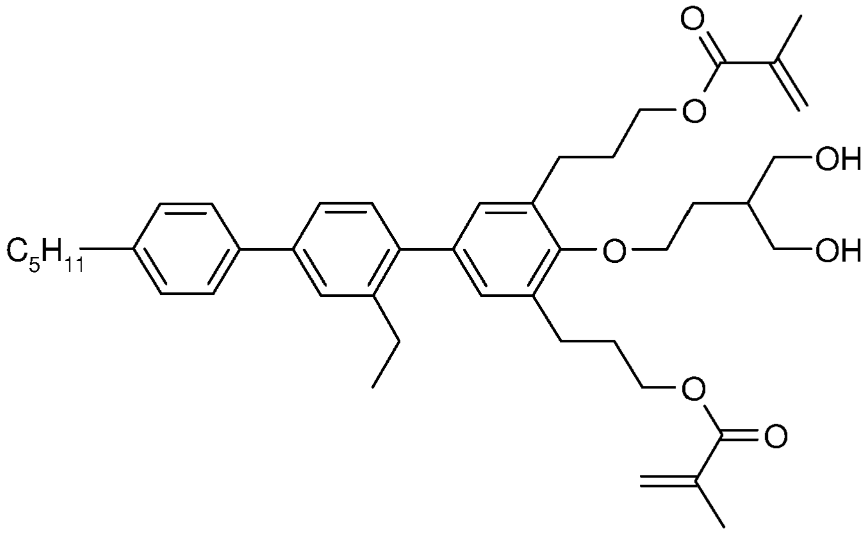

SA-15

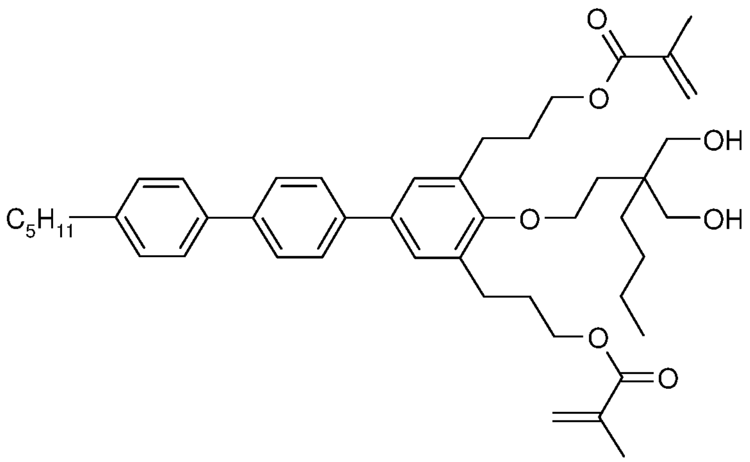

SA-16

(continued)

Table E shows self-alignment additives for vertical alignment which can be used in LC media for SA-VA and SA-FFS displays according to the present invention together with the polymerizable compounds of formula I:

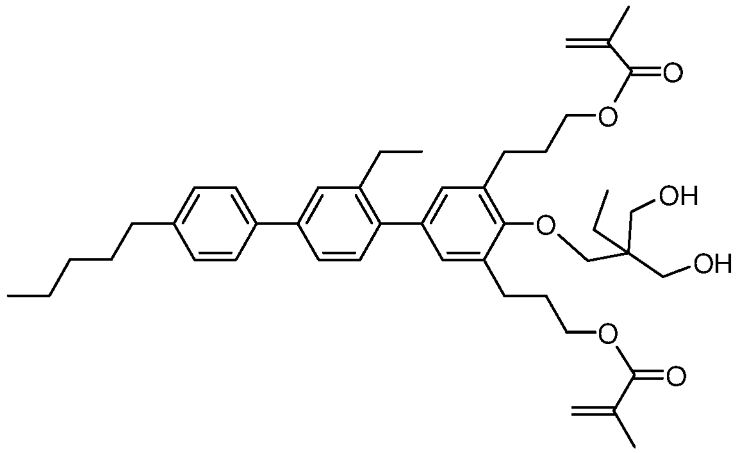

SA-17

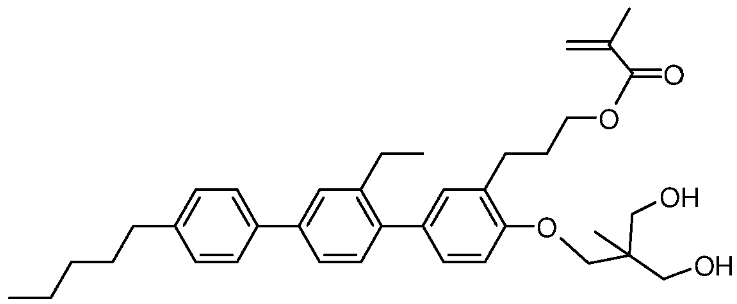

SA-18

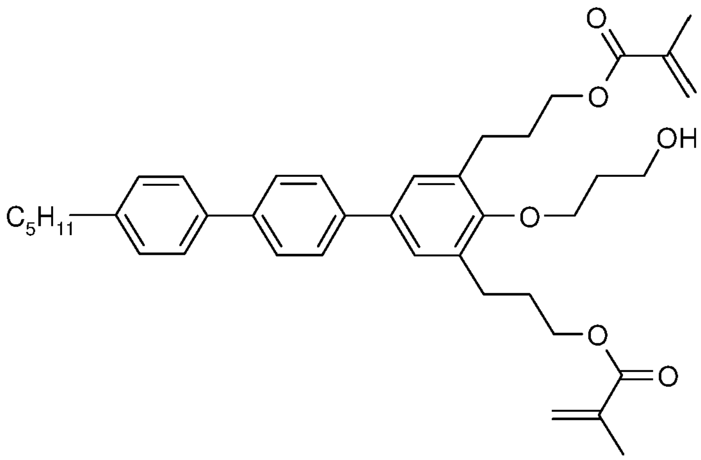

SA-19

(continued)

Table E shows self-alignment additives for vertical alignment which can be used in LC media for SA-VA and SA-FFS displays according to the present invention together with the polymerizable compounds of formula I:

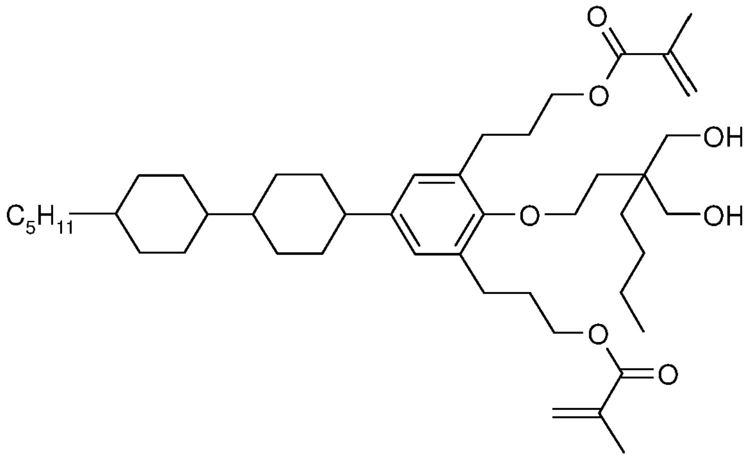

SA-20

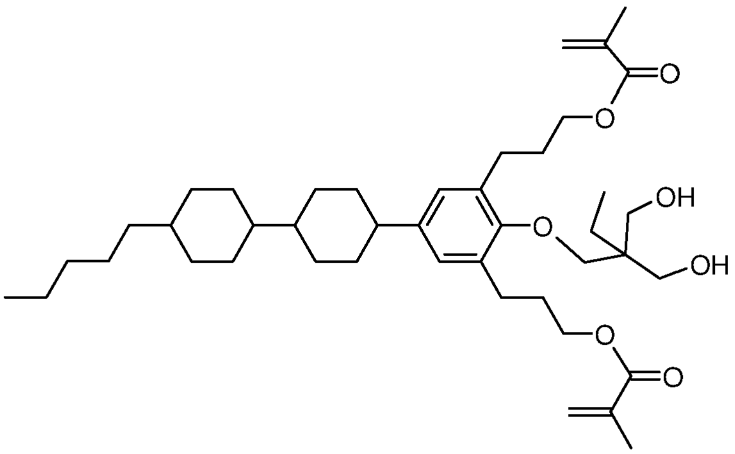

SA-21

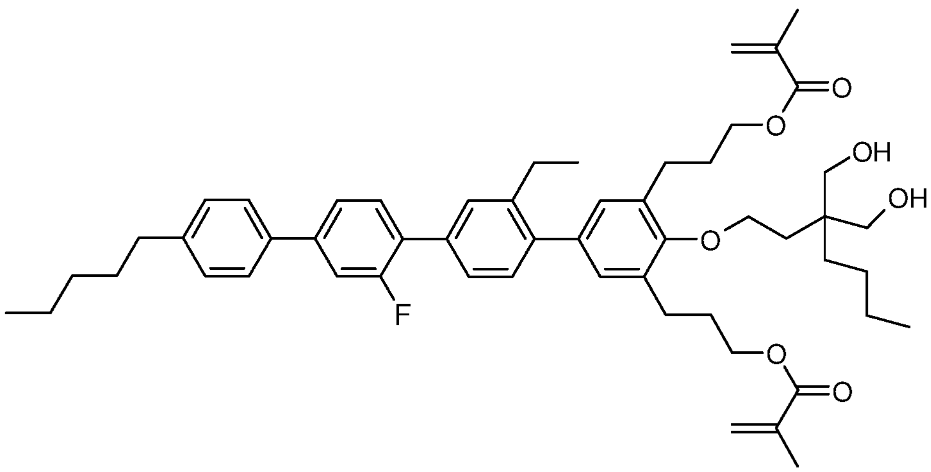

SA-22

(continued)

Table E shows self-alignment additives for vertical alignment which can be used in LC media for SA-VA and SA-FFS displays according to the present invention together with the polymerizable compounds of formula I:

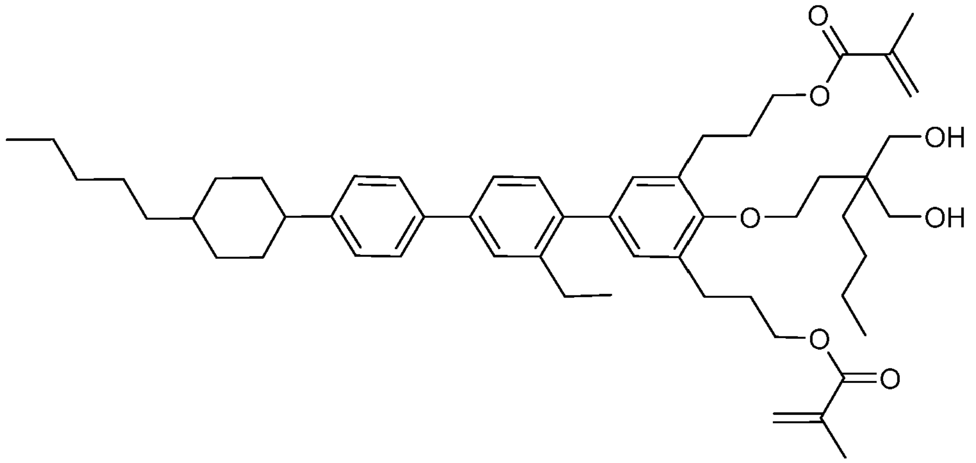

SA-23

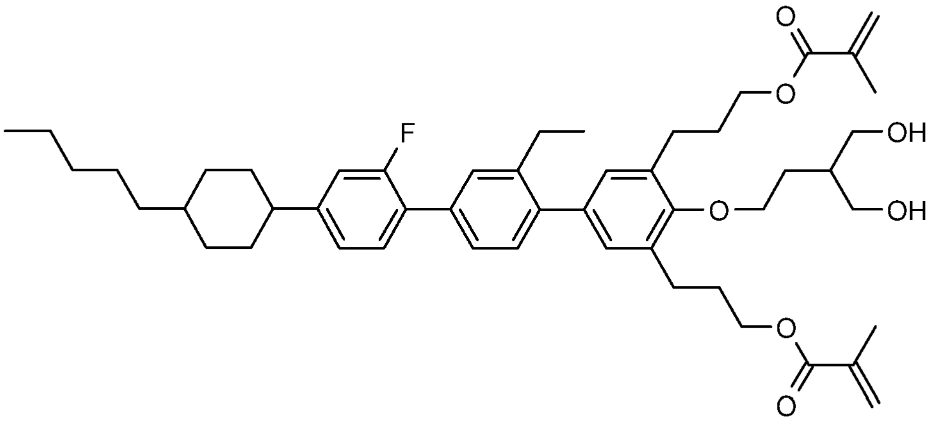

SA-24

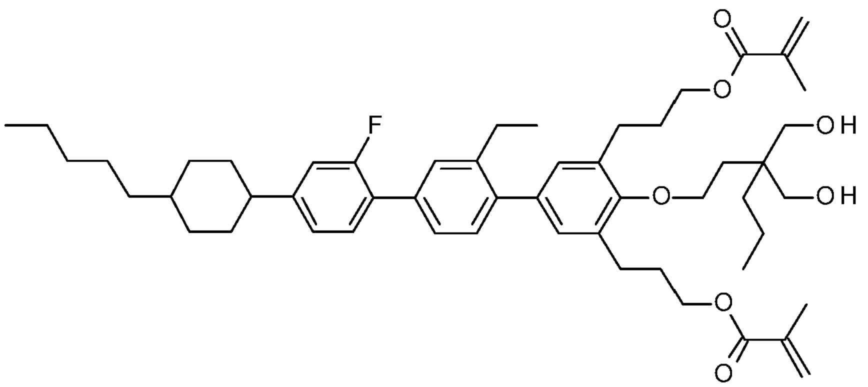

SA-25

(continued)

Table E shows self-alignment additives for vertical alignment which can be used in LC media for SA-VA and SA-FFS displays according to the present invention together with the polymerizable compounds of formula I:

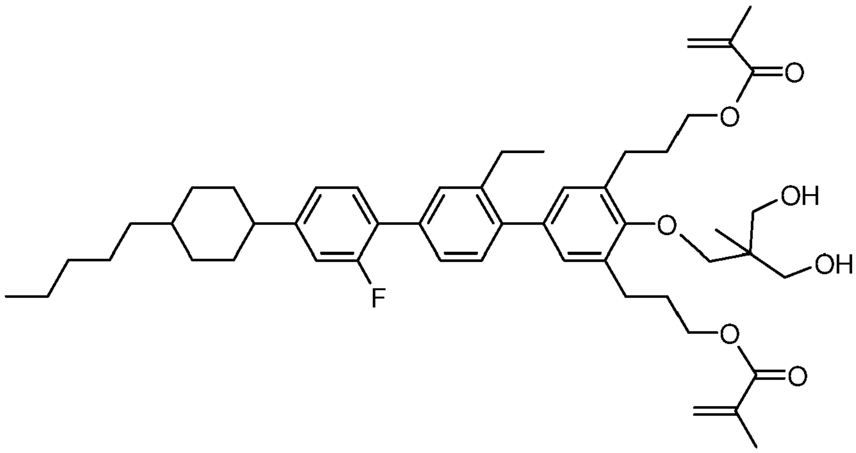

SA-26

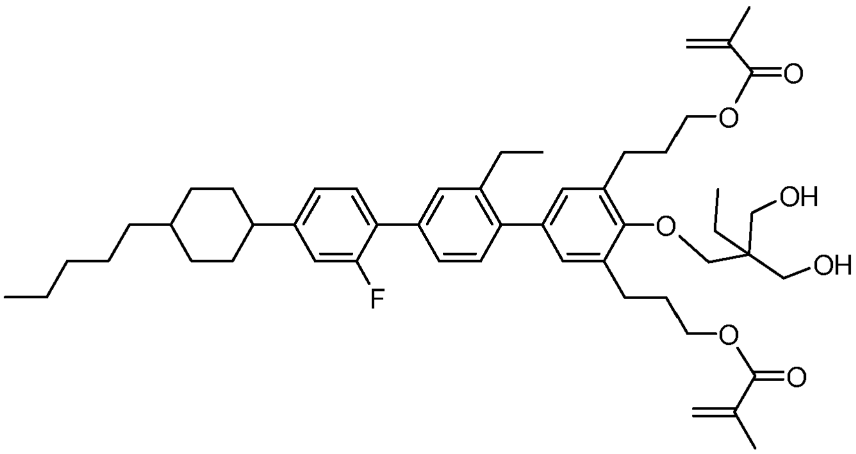

SA-27

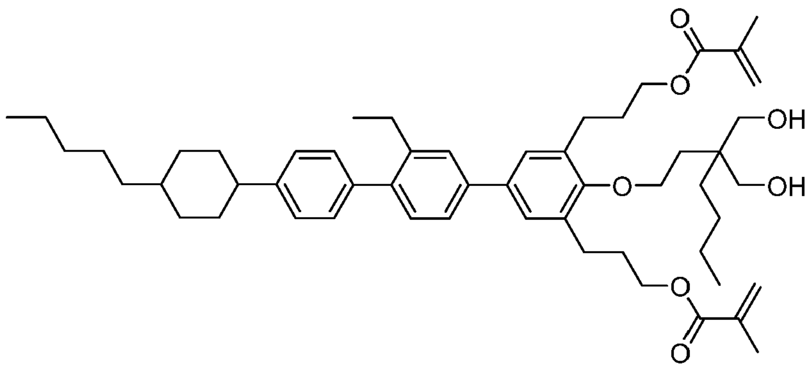

SA-28

(continued)

Table E shows self-alignment additives for vertical alignment which can be used in LC media for SA-VA and SA-FFS displays according to the present invention together with the polymerizable compounds of formula I:

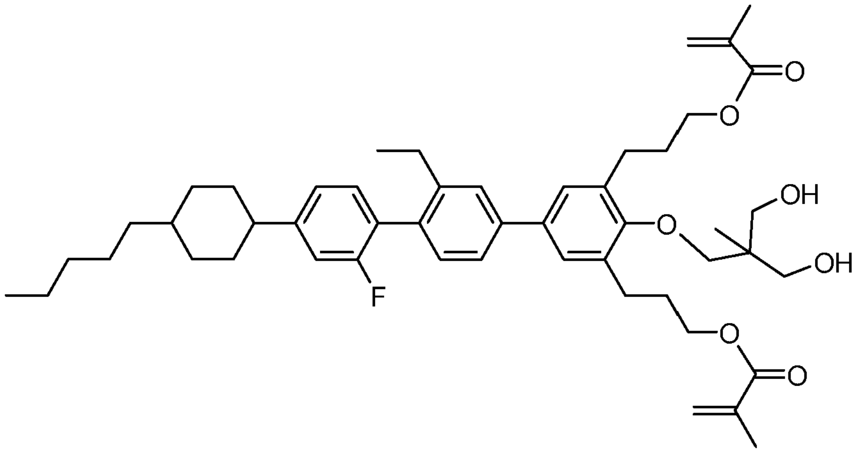

SA-29

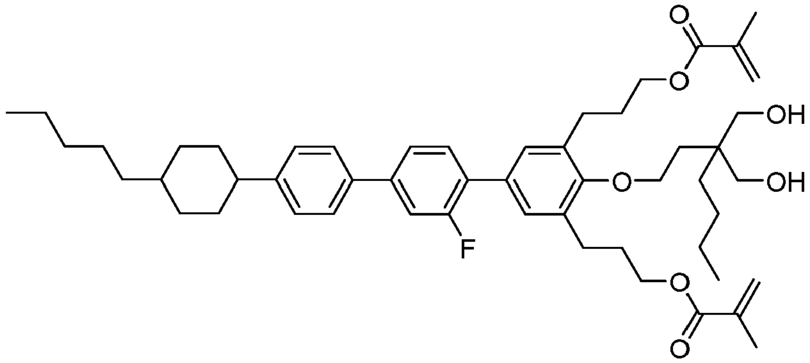

SA-30

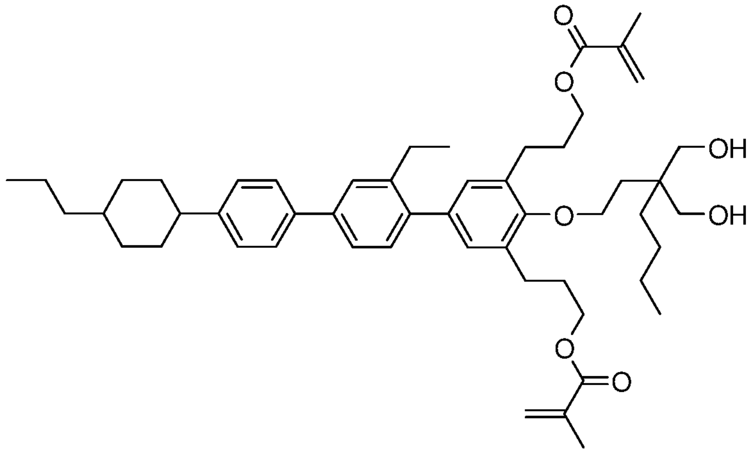

SA-31

(continued)

Table E shows self-alignment additives for vertical alignment which can be used in LC media for SA-VA and SA-FFS displays according to the present invention together with the polymerizable compounds of formula I:

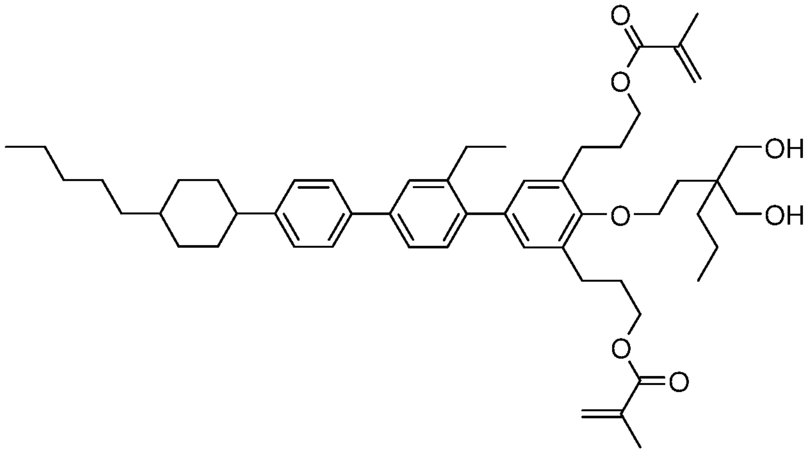

SA-32

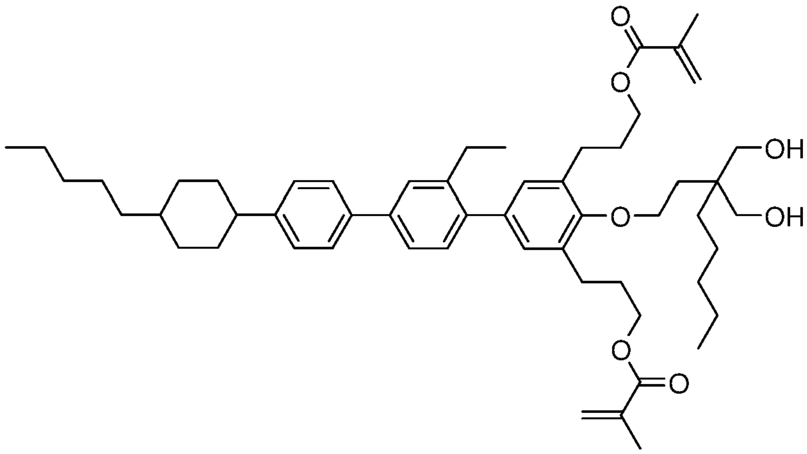

SA-33

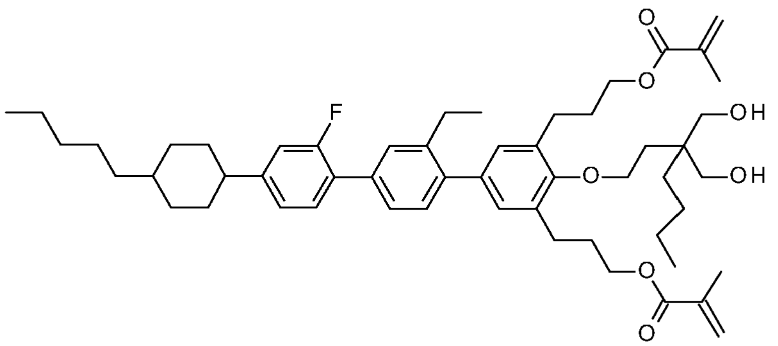

SA-34

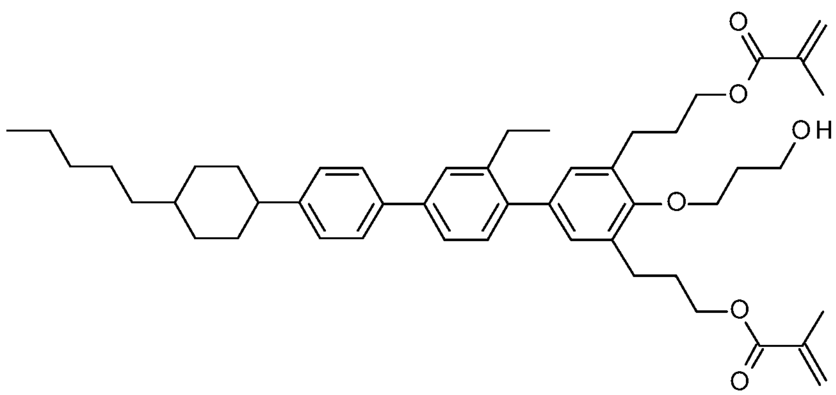

SA-35

(continued)

Table E shows self-alignment additives for vertical alignment which can be used in LC media for SA-VA and SA-FFS displays according to the present invention together with the polymerizable compounds of formula I:

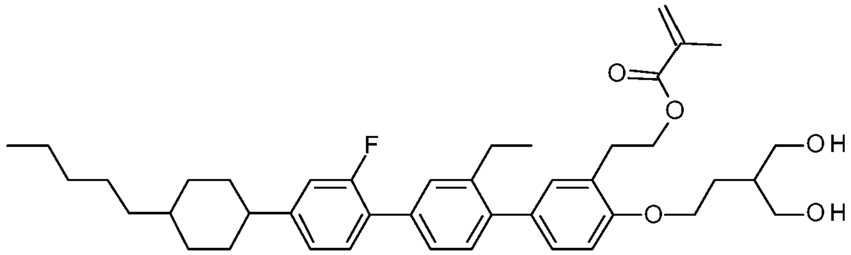

SA-36

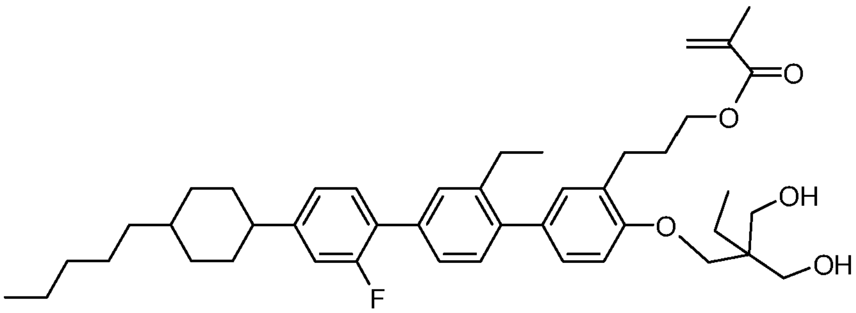

SA-37

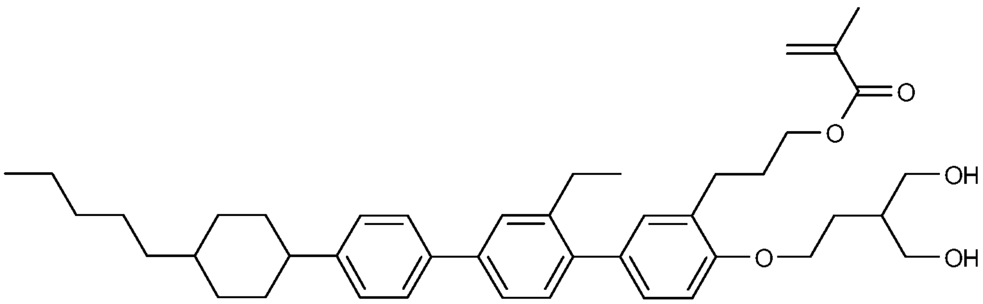

SA-38

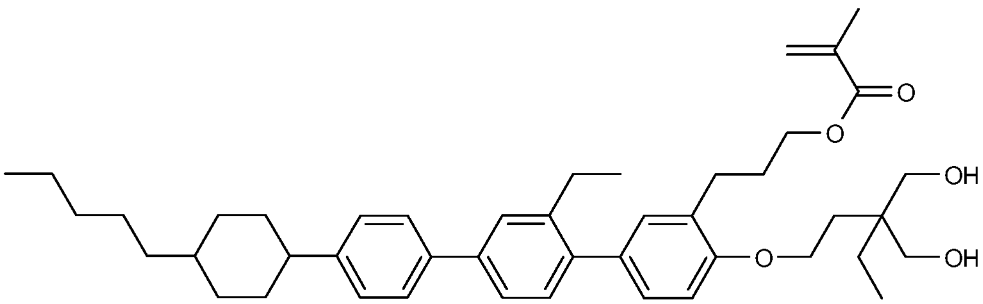

SA-39

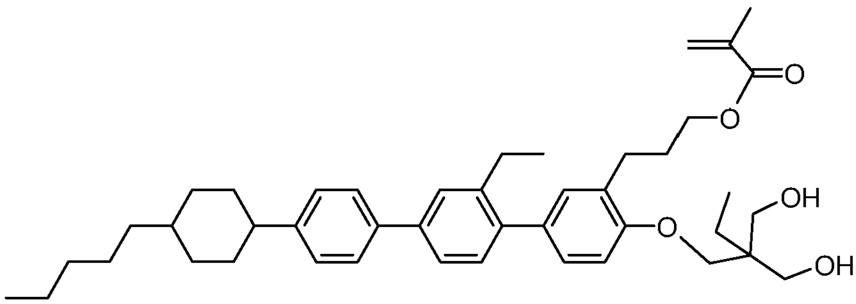

SA-40

(continued)

Table E shows self-alignment additives for vertical alignment which can be used in LC media for SA-VA and SA-FFS displays according to the present invention together with the polymerizable compounds of formula I:

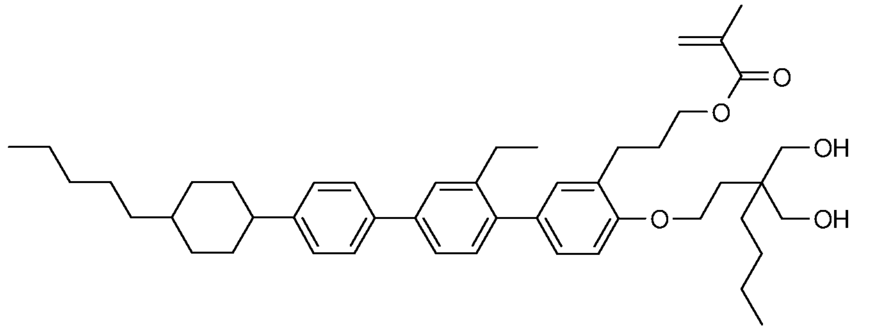

SA-41

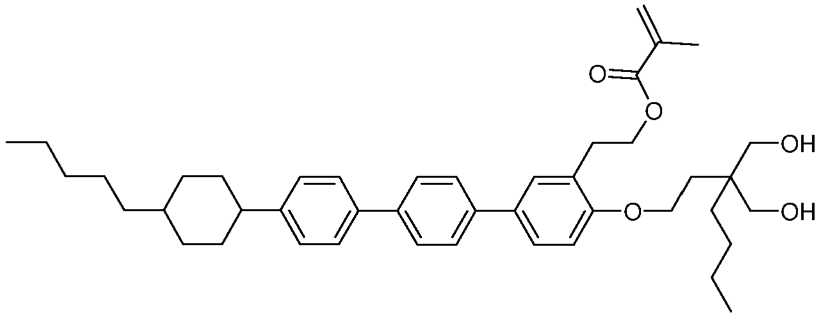

SA-42

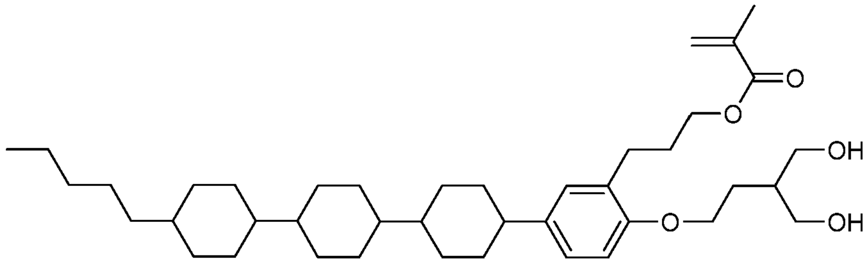

SA-43

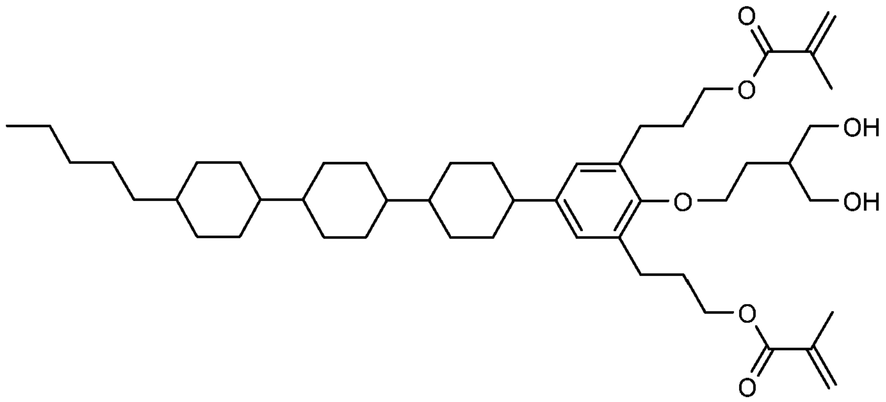

SA-44

(continued)

Table E shows self-alignment additives for vertical alignment which can be used in LC media for SA-VA and SA-FFS displays according to the present invention together with the polymerizable compounds of formula I:

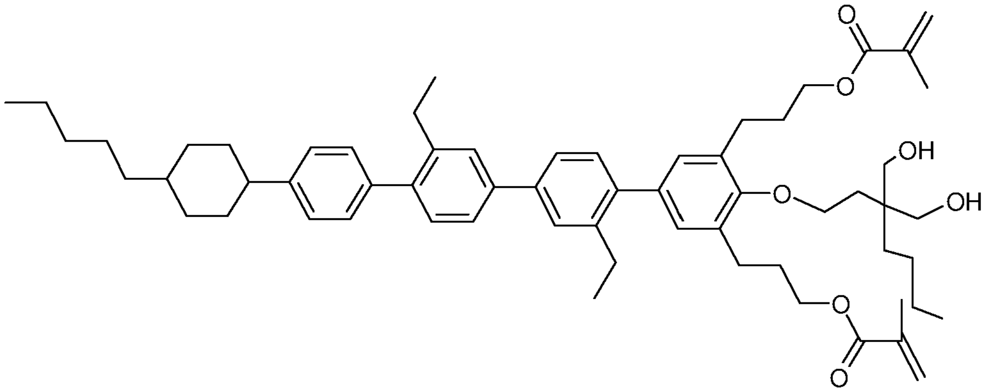

SA-45

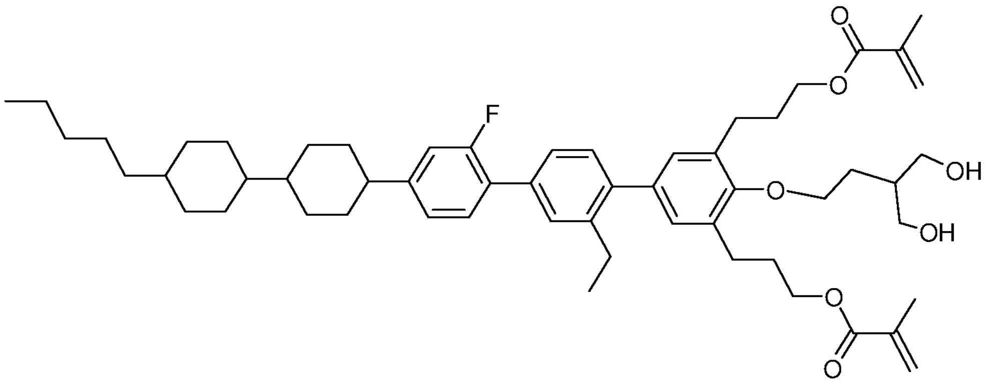

SA-46

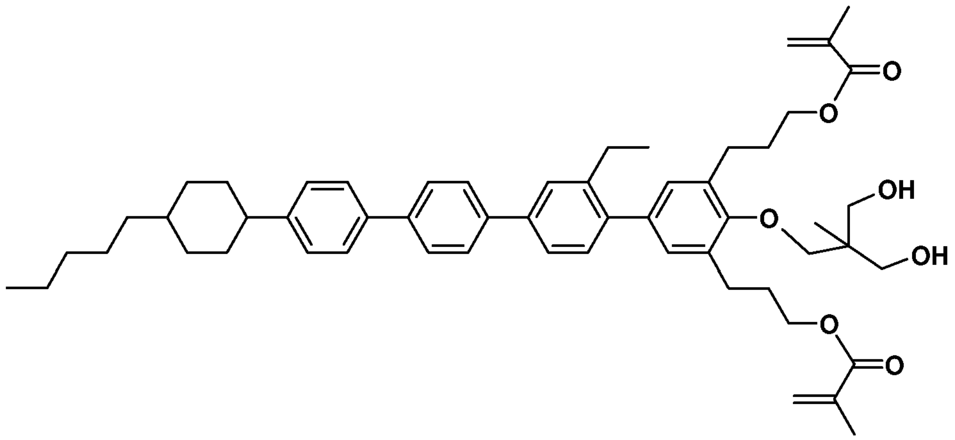

SA-47

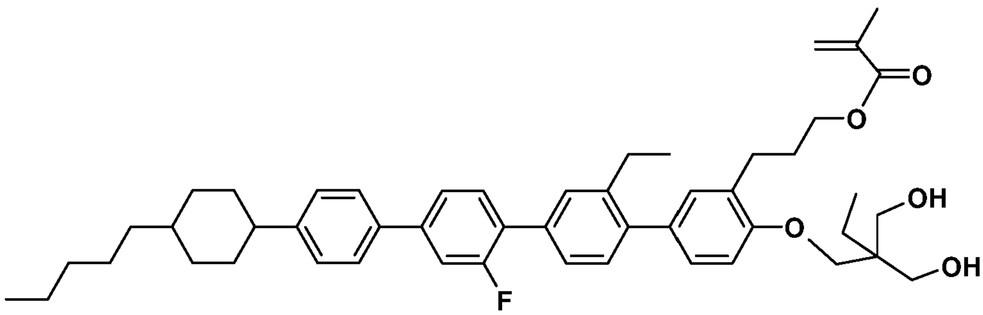

SA-48

In a preferred embodiment, the LC media, SA-VA and SA-FFS displays according to the present invention comprise one or more SA additives selected from formulae SA-1 to SA-48, preferably from formulae SA-14 to SA-48,

very preferably from formulae SA-20 to SA-34 and SA-44, in combination with one or more RMs of formula I.

Examples

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

In addition, the following abbreviations and symbols are used:

| | |
|---|---|
| $V_0$ | threshold voltage, capacitive [V] at 20°C, |
| $n_e$ | extraordinary refractive index at 20°C and 589 nm, |
| $n_o$ | ordinary refractive index at 20°C and 589 nm, |
| $\Delta n$ | optical anisotropy at 20°C and 589 nm, |
| $\varepsilon_\perp$ | dielectric permittivity perpendicular to the director at 20°C and 1 kHz, |
| $\varepsilon\|$ | dielectric permittivity parallel to the director at 20°C and 1 kHz, |
| $\Delta\varepsilon$ | dielectric anisotropy at 20°C and 1 kHz, |
| cl.p., T(N,I) | clearing point [°C], |
| $\gamma_1$ | rotational viscosity at 20°C [mPa ·s], |
| $K_1$ | elastic constant, "splay" deformation at 20°C [pN] , |
| $K_2$ | elastic constant, "twist" deformation at 20°C [pN] , |
| $K_3$ | elastic constant, "bend" deformation at 20°C [pN]. |

Unless explicitly noted otherwise, all concentrations in the present application are quoted in percent by weight and relate to the corresponding mixture as a whole, comprising all solid or liquid-crystalline components, without solvents.

Unless explicitly noted otherwise, all temperature values indicated in the present application, such as, for example, for the melting point T(C,N), the transition from the smectic (S) to the nematic (N) phase T(S,N) and the clearing point T(N,I), are quoted in degrees Celsius (°C). M.p. denotes melting point, cl.p. = clearing point. Furthermore, C = crystalline state, N = nematic phase, S = smectic phase and I = isotropic phase. The data between these symbols represent the transition temperatures.

All physical properties are and have been determined in accordance with "Merck Liquid Crystals, Physical Properties of Liquid Crystals", Status Nov. 1997, Merck KGaA, Germany, and apply for a temperature of 20°C, and $\Delta n$ is determined at 589 nm and $\Delta\varepsilon$ at 1 kHz, unless explicitly indicated otherwise in each case.

The term "threshold voltage" for the present invention relates to the capacitive threshold ($V_0$), also known as the Freedericks threshold, unless explicitly indicated otherwise. In the examples, the optical threshold may also, as generally usual, be quoted for 10% relative contrast ($V_{10}$).

Unless stated otherwise, the process of polymerizing the polymerizable compounds in the PSA displays as described above and below is carried out at a temperature where the LC medium exhibits a liquid crystal phase, preferably a nematic phase, and most preferably is carried out at room temperature.

Unless stated otherwise, methods of preparing test cells and measuring their electrooptical and other properties are carried out by the methods as described hereinafter or in analogy thereto.

The display used for measurement of the capacitive threshold voltage consists of two plane-parallel glass outer plates at a separation of 25 μm, each of which has on the inside an electrode layer and an unrubbed polyimide alignment layer on top, which effect a homeotropic edge alignment of the liquid-crystal molecules.

The PSVA display or PSVA test cell used for measurement of the tilt angles consists of two plane-parallel glass outer plates at a separation of ca. 3.3 μm unless stated otherwise, each of which has on the inside an electrode layer and a polyimide alignment layer on top, where the two polyimide layers are rubbed antiparallel to one another and effect a homeotropic edge alignment of the liquid-crystal molecules. The SAVA display or test cell have one or no polyimide orientation layer and a patterned electrode structure resulting in two or more domains of LC orientation direction. For tilt measurements, the light of a single domain is transmitted by the use of light blocking layers or shields.

The polymerizable compounds are polymerized in the display or test cell by irradiation with UV light of defined intensity for a prespecified time, with a voltage simultaneously being applied to the display (usually 10 V to 30 V alternating current, 1 kHz). In the examples, unless indicated otherwise, a metal halide lamp and an intensity of 100 $mW/cm^2$ is used for polymerization. The intensity is measured using a standard meter (Hoenle UV-meter high end with UV sensor).

The tilt angle is determined using the Mueller Matrix Polarimeter "AxoScan" from Axometrics. A low value (i.e. a large deviation from the 90°angle) corresponds to a large tilt here.

The tilt angle can be also determined by the polarimeter RETS from Otsuka Electronics Co., Ltd. For VA mode case, for small retardation values the tilt-angle is small, which means the LC director is close to the vertical (homeotropic)

alignment.

Unless stated otherwise, the term "tilt angle" means the angle between the LC director and the substrate, and "LC director" means in a layer of LC molecules with uniform orientation the preferred orientation direction of the optical main axis of the LC molecules, which corresponds, in case of calamitic, uniaxially positive birefringent LC molecules, to their molecular long axis.

Example 1

The nematic LC host mixture N1 is formulated as follows

| | | | |
|---|---|---|---|
| BCH-32 | 6.50 % | cl.p. | 74.7°C |
| CC-3-V1 | 8.00 % | $\Delta n$ | 0.1039 |
| CCH-23 | 17.00 % | $n_e$ | 1.5900 |
| CCH-34 | 6.50 % | $n_o$ | 1.4861 |
| CCY-3-O1 | 3.50 % | $\Delta\varepsilon$ | -3.0 |
| CCY-3-O2 | 12.50 % | $\varepsilon\|$ | 3.4 |
| CPY-2-O2 | 5.50 % | $\varepsilon_{\|}$ | 6.3 |
| CPY-3-O2 | 10.00 % | $\gamma_1$ | 106 mPa-s |
| CY-3-O2 | 15.50 % | $K_1$ | 14.8 |
| PCH-301 | 4.50 % | $K_3$ | 15.8 |
| PP-1-2V1 | 5.00 % | $K_3/K_1$ | 1.07 |
| PY-3-O2 | 5.50 % | $V_0$ | 2.43 V |

Polymerizable mixture P1 is prepared by adding 0.4% of the polymerizable compound M1 and 50ppm of the stabilizer S1-1 to the nematic LC host mixture N1.

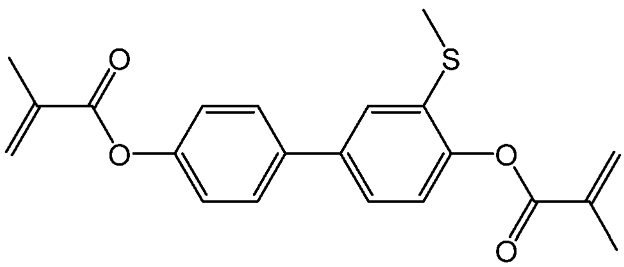

M1

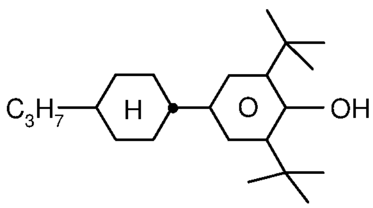

S1-1

Example 2

The nematic LC host mixture N2 is formulated as follows

| | | | |
|---|---|---|---|
| B(S)-2O-O4 | 4.50 % | cl.p. | 76°C |
| B(S)-2O-O5 | 5.00 % | $\Delta n$ | 0.1120 |
| BCH-32 | 6.00 % | ne | 1.6002 |
| CC-3-V | 47.50 % | $n_o$ | 1.4882 |
| CLY-3-O2 | 6.00 % | $\Delta\varepsilon$ | -3.0 |
| CPY-2-O2 | 10.50 % | $\varepsilon_{\|}$ | 3.5 |
| CPY-3-02 | 10.50 % | $\varepsilon_{\|}$ | 6.6 |

(continued)

| | | | |
|---|---|---|---|
| PY-1-O2 | 10.00 % | $\gamma_1$ | 74 mPa-s |
| | | $K_1$ | 14.2 |
| | | $K_3$ | 14.5 |
| | | $K_3/K_1$ | 1.03 |
| $V_0$ | | | 2.31 V |

Polymerizable mixture P2 is prepared by adding 0.3% of the polymerizable compound M1 and 100ppm of the stabilizer S1-1 to the nematic LC host mixture N2.

Example 3.1

The nematic LC host mixture N3 is formulated as follows

| | | | |
|---|---|---|---|
| B(S)-2O-O4 | 5.00 % | cl.p. | 74.3 |
| B(S)-2O-O5 | 5.00 % | $\Delta n$ | 0.1302 |
| BCH-32 | 9.00 % | $n_e$ | 1.625 |
| CC-3-V | 15.00 % | $n_o$ | 1.4948 |
| CC-3-V1 | 7.50 % | $\Delta\varepsilon$ | -2.9 |
| CC-4-V1 | 13.00 % | ε\|\| \|\|\|\| | 3.6 |
| CCP-3-1 | 10.00 % | $\varepsilon_{\|}$ | 6.5 |
| CLY-3-O2 | 2.50 % | $\gamma_1$ | 89 |
| CPY-3-O2 | 2.00 % | K1 | 15.1 |
| PY-1-O2 | 12.00 % | $K_3$ | 15 |
| PY-3-O2 | 10.00 % | $K_3/K_1$ | 0.99 |
| PYP-2-3 | 9.00 % | $V_0$ | 2.42 V |

Polymerizable mixture P3 is prepared by adding 0.3% of the polymerizable compound M1 and 50ppm of the stabilizer S1-1 to the nematic LC host mixture N3.

Example 3.2

Chiral nematic host mixture C3 is prepared by adding 0.91% of the chiral dopant S-4011 to the nematic host mixture N3.

Polymerizable mixture P3c is prepared by adding 0.3% of the polymerizable compound M1 and 50ppm of the stabilizer S1-1 to the chiral nematic LC host mixture C3.

Example 4

The nematic LC host mixture N4 is formulated as follows

| | | | |
|---|---|---|---|
| CC-3-V1 | 9.00 % | cl.p. | 74.6°C |
| CCH-301 | 3.50 % | $\Delta n$ | 0.0984 |
| CCH-34 | 8.00 % | $n_e$ | 1.5804 |
| CCH-35 | 8.00 % | $n_o$ | 1.4820 |
| CCP-3-1 | 6.00 % | $\Delta\varepsilon$ | -3.6 |
| CCY-3-O1 | 6.50 % | εII | 3.6 |
| CCY-3-O2 | 12.50 % | $\varepsilon_{\|}$ | 7.1 |
| CPY-3-O2 | 10.00 % | $\gamma_1$ | 119 mPa-s |
| CY-3-O2 | 15.50 % | K1 | 14.1 |
| PCH-301 | 8.50 % | $K_3$ | 17.0 |
| PY-3-O2 | 12.50 % | $K_3/K_1$ | 1.21 |
| | | $V_0$ | 2.31 V |

Polymerizable mixture P4 is prepared by adding 0.3% of the polymerizable compound M2 to the nematic LC host mixture N4.

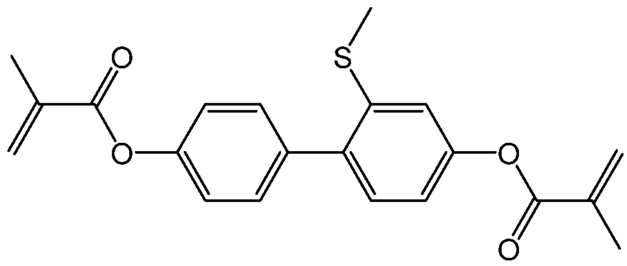

M2

Example 5

The nematic LC host mixture N5 is formulated as follows

| | | | |
|---|---|---|---|
| B(S)-2O-O4 | 4.50 % | cl.p. | 75.5°C |
| B(S)-2O-O5 | 5.00 % | $\Delta n$ | 0.1120 |
| BCH-32 | 6.00 % | $n_e$ | 1.6001 |
| CC-3-V | 30.00 % | $n_o$ | 1.4881 |
| CC-3-V1 | 8.00 % | $\Delta\varepsilon$ | -4.1 |
| CCY-3-O1 | 7.50 % | εll | 3.8 |
| CCY-3-O2 | 11.00 % | $\varepsilon_{\parallel}$ | 8.0 |
| CLY-3-O2 | 8.00 % | $\gamma_1$ | 92 mPa·s |
| PY-1-O2 | 10.50 % | K1 | 14.8 |
| PY-2-O2 | 9.50 % | $K_3$ | 15.7 |
| | | $K_3/K_1$ | 1.06 |
| | | $V_0$ | 2.06 V |

Polymerizable mixture P5 is prepared by adding 0.3% of the polymerizable compound M2 and 50ppm of the stabilizer S1-1 to the nematic LC host mixture N5.

Example 6

The nematic LC host mixture N6 is formulated as follows

| | | | |
|---|---|---|---|
| B(S)-2O-O4 | 4.50 % | cl.p. | 74.9°C |
| B(S)-2O-O5 | 5.00 % | $\Delta n$ | 0.1122 |
| B(S)-2O-O6 | 2.00 % | $n_e$ | 1.5993 |
| CC-3-V | 30.00 % | $n_o$ | 1.4871 |
| CC-4-V1 | 17.50 % | $\Delta\varepsilon$ | -3.7 |
| CLY-3-O2 | 8.00 % | εll | 3.7 |
| CPY-2-O2 | 10.00 % | $\varepsilon_{\parallel}$ | 7.4 |
| CPY-3-O2 | 10.00 % | $\gamma_1$ | 85 mPa·s |
| PY-1-O2 | 3.00 % | K1 | 14.5 |
| PY-2-O2 | 10.00 % | $K_3$ | 14.2 |
| | | $K_3/K_1$ | 0.98 |
| | | $V_0$ | 2.07 V |

Polymerizable mixture P6 is prepared by adding 0.3% of the polymerizable compound M1 and 50ppm of the stabilizer S1-1 to the nematic LC host mixture N6.

Example 7

The nematic LC host mixture N7 is formulated as follows

| | | | |
|---|---|---|---|
| B(S)-2O-O4 | 4.00 % | cl.p. | 74.7 |
| B(S)-2O-O5 | 5.00 % | Δn | 0.1122 |
| BCH-32 | 7.00 % | $n_e$ | 1.5977 |
| CC-3-V1 | 8.00 % | $n_o$ | 1.4855 |
| CC-4-V1 | 11.00 % | Δε | -3.8 |
| CCH-34 | 8.00 % | εll | 3.9 |
| CCH-35 | 6.00 % | $\varepsilon_{\parallel}$ | 7.7 |
| CCY-3-O2 | 11.00 % | $\gamma_1$ | 109 mPa·s |
| CPY-2-O2 | 3.00 % | K1 | 15.0 |
| CPY-3-O2 | 5.00 % | $K_3$ | 15.4 |
| CY-3-O2 | 15.00 % | $K_3/K_1$ | 0.97 |
| PCH-302 | 5.00 % | $V_0$ | 2.13 |
| PPGU-3-F | 1.00 % | | |
| PY-1-O2 | 4.00 % | | |
| PY-2-O2 | 7.00 % | | |

Polymerizable mixture P7 is prepared by adding 0.3% of the polymerizable compound M1 and 50ppm of the stabilizer S2-1 to the nematic LC host mixture N7.

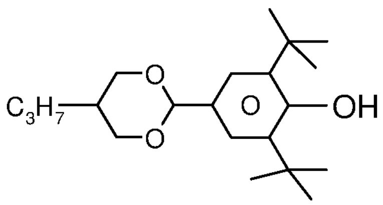

S2-1

Example 8

The nematic LC host mixture N8 is formulated as follows

| | | | |
|---|---|---|---|
| CC-3-V1 | 8.50 % | cl.p. | 75.1°C |
| CC-4-V1 | 19.00 % | Δn | 0.1123 |
| CCY-3-O1 | 6.00 % | $n_e$ | 1.5969 |
| CCY-3-O2 | 11.00 % | $n_o$ | 1.4846 |
| CLY-3-O2 | 5.00 % | Δε | -3.9 |
| CPY-3-O2 | 11.00 % | ε‖ | 3.7 |
| CY-3-O2 | 6.00 % | $\varepsilon_{\parallel}$ | 7.5 |
| PCH-302 | 13.50 % | $\gamma_1$ | 124 mPa·s |
| PY-1-O2 | 6.00 % | K1 | 15.2 |
| PY-2-O2 | 6.00 % | $K_3$ | 18.3 |
| PY-3-O2 | 8.00 % | $K_3/K_1$ | 1.20 |
| | | $V_0$ | 2.29 V |

Polymerizable mixture P8 is prepared by adding 0.3% of the polymerizable compound M3 and 50ppm of the stabilizer S1-1 to the nematic LC host mixture N8.

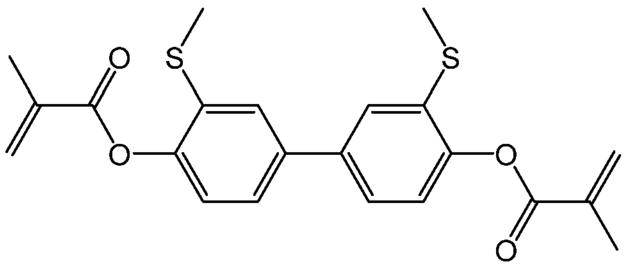

M3

Example 9

The nematic LC host mixture N9 is formulated as follows

| | | | |
|---|---|---|---|
| B(S)-2O-O4 | 2.00 % | cl.p. | 73.9 |
| B(S)-2O-O5 | 2.50 % | $\Delta n$ | 0.1165 |
| BCH-32 | 8.00 % | $n_e$ | 1.6084 |
| CC-3-V | 30.00 % | $n_o$ | 1.4919 |
| CC-4-V1 | 7.00 % | $\Delta\varepsilon$ | -2.7 |
| CCP-3-1 | 11.00 % | εll | 3.6 |
| CLY-3-O2 | 3.00 % | $\varepsilon_{\parallel}$ | 6.3 |
| CPY-2-O2 | 2.00 % | $\gamma_1$ | 79 mPa·s |
| CPY-3-O2 | 12.00 % | K1 | 14.1 |
| PY-1-O2 | 11.50 % | $K_3$ | 14.7 |
| PY-2-O2 | 11.00 % | $K_3/K_1$ | 1.04 |
| | | $V_0$ | 2.46 V |

Polymerizable mixture P9 is prepared by adding 1.0% of the polymerizable compound M1 and 0.6% of the SA additive SA23 to the nematic LC host mixture N9.

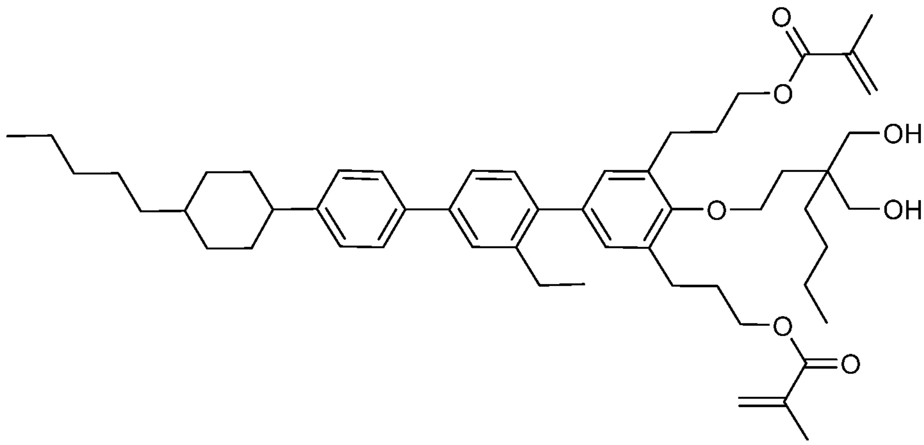

SA23

Example 10

The nematic LC host mixture N10 is formulated as follows

| | | | |
|---|---|---|---|
| B(S)-2O-O4 | 4.50 % | cl.p. | 75.6°C |
| B(S)-2O-O5 | 3.00 % | $\Delta n$ | 0.1049 |
| CC-3-V | 51.00 % | $n_e$ | 1.5904 |
| CCP-3-1 | 1.00 % | $n_o$ | 1.4855 |
| CLY-3-O2 | 9.00 % | $\Delta\varepsilon$ | -3.1 |

(continued)

| | | | |
|---|---|---|---|
| CPY-2-O2 | 10.00 % | εll | 3.5 |
| CPY-3-O2 | 12.00 % | $\varepsilon_{\|}$ | 6.6 |
| PY-1-O2 | 9.50 % | $\gamma_1$ | 72 mPa·s |
| | | K1 | 14.1 |
| | | $K_3$ | 15.0 |
| | | $K_3/K_1$ | 1.06 |
| | | $V_0$ | 2.34 V |

Polymerizable mixture P10 is prepared by adding 0.4% of the polymerizable compound M3 and 50ppm of the stabilizer S1-1 to the nematic LC host mixture N10.

Example 11

The nematic LC host mixture N11 is formulated as follows

| | | | |
|---|---|---|---|
| CC-3-V1 | 9.00 % | cl.p. | 75.4°C |
| CCH-23 | 14.00 % | Δn | 0.1055 |
| CCH-34 | 6.00 % | $n_e$ | 1.5907 |
| CCH-35 | 6.00 % | $n_o$ | 1.4852 |
| CCP-3-1 | 7.00 % | Δε | -2.8 |
| CCY-3-O1 | 5.00 % | εll | 3.3 |
| CCY-3-O2 | 10.00 % | $\varepsilon_{\|}$ | 6.1 |
| CPY-3-O2 | 12.00 % | $\gamma_1$ | 102 mPa·s |
| CY-3-O2 | 9.50 % | K1 | 16.2 |
| PP-1-2V1 | 8.50 % | $K_3$ | 17.3 |
| PY-3-O2 | 12.00 % | $K_3/K_1$ | 1.07 |
| PY-4-O2 | 1.00 % | $V_0$ | 2.67 V |

Polymerizable mixture P11 is prepared by adding 0.4% of the polymerizable compound M1 and 50ppm of the stabilizer S2-1 to the nematic LC host mixture N11.

Example 12

The nematic LC host mixture N12 is formulated as follows

| | | | |
|---|---|---|---|
| CC-3-V1 | 9.00 % | cl.p. | 74.7°C |
| CCH-23 | 18.00 % | Δn | 0.0982 |
| CCH-34 | 3.00 % | $n_e$ | 1.5800 |
| CCH-35 | 7.00 % | $n_o$ | 1.4818 |
| CCP-3-1 | 5.50 % | Δε | -3.4 |
| CCY-3-O2 | 11.50 % | εll | 3.5 |
| CPY-2-O2 | 8.00 % | $\varepsilon_{\|}$ | 6.9 |
| CPY-3-O2 | 11.00 % | $\gamma_1$ | 108 mPa-s |
| CY-3-O2 | 15.50 % | K1 | 14.9 |
| PY-3-O2 | 11.50 % | $K_3$ | 15.9 |
| | | $K_3/K_1$ | 1.07 |
| | | $V_0$ | 2.28 V |

Polymerizable mixture P12 is prepared by adding 0.3% of the polymerizable compound M1 and 50ppm of the stabilizer S1-1 to the nematic LC host mixture N12.

Example 13

The nematic LC host mixture N13 is formulated as follows

| | | | |
|---|---|---|---|
| BCH-32 | 10.00 % | cl.p. | 74.6°C |
| CC-3-V1 | 6.50 % | Δn | 0.1113 |
| CCH-34 | 8.00 % | $n_e$ | 1.5981 |
| CCH-35 | 8.00 % | $n_o$ | 1.4868 |
| CCY-3-O2 | 12.00 % | Δε | -3.3 |
| CPY-2-O2 | 6.50 % | ε‖ | 3.5 |
| CPY-3-O2 | 11.00 % | $\varepsilon_{\parallel}$ | 6.8 |
| CY-3-O2 | 15.00 % | $\gamma_1$ | 128 mPa·s |
| CY-5-O2 | 13.00 % | $K_1$ | 14.5 |
| PP-1-4 | 10.00 % | $K_3$ | 15.3 |
| | | $K_3/K_1$ | 1.06 |
| | | $V_0$ | 2.28 V |

Polymerizable mixture P13 is prepared by adding 0.3% of the polymerizable compound M1 and 50ppm of the stabilizer S1-1 to the nematic LC host mixture N13.

Example 14

The nematic LC host mixture N14 is formulated as follows

| | | | |
|---|---|---|---|
| CC-3-V1 | 8.00 % | cl.p. | 74.6°C |
| CCH-23 | 15.0 % | Δn | 0.0899 |
| CCH-34 | 5.00 % | $n_e$ | 1.5694 |
| CCH-35 | 6.00 % | $n_o$ | 1.4795 |
| CCP-3-1 | 3.00 % | Δε | -3.3 |
| CCY-3-O1 | 8.00 % | $\varepsilon_{\parallel}$ | 3.5 |
| CCY-3-O2 | 10.00 % | $\varepsilon_{\parallel}$ | 6.8 |
| CCY-3-O3 | 6.00 % | $\gamma_1$ | 114 mPa·s |
| CCY-4-O2 | 6.00 % | $K_1$ | 13.9 |
| CY-3-O2 | 12.0 % | $K_3$ | 14.6 |
| CY-3-O4 | 3.75 % | $K_3/K_1$ | 1.05 |
| PCH-301 | 3.00 % | $V_0$ | 2.22 V |
| PY-3-O2 | 2.75 % | | |
| PY-4-O2 | 6.50 % | | |
| PYP-2-3 | 5.00 % | | |

Polymerizable mixture P14 is prepared by adding 0.4% of the polymerizable compound M1 and 50ppm of the stabilizer S2-1 to the nematic LC host mixture N14.

Example 15

The nematic LC host mixture N15 is formulated as follows

| | | | |
|---|---|---|---|
| B(S)-2O-O4 | 0.25 % | cl.p. | 74.6°C |
| BCH-32 | 4.50 % | Δn | 0.1034 |
| CC-3-V1 | 13.00 % | $n_e$ | 1.5883 |
| CCH-23 | 15.00 % | $n_o$ | 1.4849 |
| CCH-301 | 1.00 % | Δε | -2.9 |
| CCH-34 | 2.00 % | ε‖ | 3.4 |

(continued)

| | | | |
|---|---|---|---|
| CCH-35 | 0.50 % | $\varepsilon_{\parallel}$ | 6.3 |
| CCY-3-O2 | 6.50 % | $\gamma_1$ | 103 mPa·s |
| CPY-2-O2 | 12.00 % | $K_1$ | 13.0 |
| CPY-3-02 | 15.00 % | $K_3$ | 15.3 |
| CY-3-O2 | 15.50 % | $K_3/K_1$ | 1.18 |
| CY-3-O4 | 0.25 % | $V_0$ | 2.44 V |
| PCH-301 | 13.00 % | | |
| PP-1-2V1 | 0.50 % | | |
| PYP-2-3 | 1.00 % | | |

Polymerizable mixture P15 is prepared by adding 0.4% of the polymerizable compound M1 and 50ppm of the stabilizer S3-1 to the nematic LC host mixture N15.

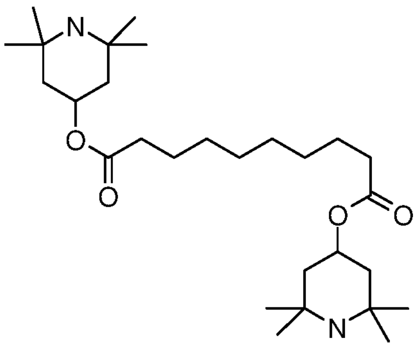

S3-1

Example 16

The nematic LC host mixture N16 is formulated as follows

| | | | |
|---|---|---|---|
| CCH-301 | 6.00 % | cl.p. | 109.9°C |
| CCH-303 | 10.00 % | $\Delta n$ | 0.0976 |
| CCH-501 | 4.00 % | $n_e$ | 1.5806 |
| CCP-3-1 | 7.00 % | $n_o$ | 1.4830 |
| CCPC-33 | 3.00 % | $\Delta\varepsilon$ | -3.6 |
| CCPC-34 | 3.00 % | $\varepsilon\|$ | 3.4 |
| CCY-3-O1 | 5.50 % | $\varepsilon_{\parallel}$ | 7.0 |
| CCY-3-O2 | 9.50 % | $\gamma_1$ | 233 mPa·s |
| CCY-3-O3 | 7.00 % | $K_1$ | 16.9 |
| CCY-4-O2 | 8.50 % | $K_3$ | 19.6 |
| CPY-2-O2 | 3.00 % | $K_3/K_1$ | 1.16 |
| CPY-3-O2 | 12.50 % | $V_0$ | 2.47 V |
| CY-3-O4 | 9.50 % | | |
| PCH-301 | 11.50 % | | |

Polymerizable mixture P16 is prepared by adding 0.4% of the polymerizable compound M1 and 50ppm of the stabilizer S1-1 to the nematic LC host mixture N16.

Example 17

The nematic LC host mixture N17 is formulated as follows

| | | | |
|---|---|---|---|
| BCH-32 | 8.00 % | cl.p. | 74.6°C |

(continued)

| | | | |
|---|---|---|---|
| CC-3-V1 | 13.00 % | Δn | 0.1042 |
| CC-4-V1 | 2.50 % | $n_e$ | 1.5897 |
| CCH-301 | 10.00 % | $n_o$ | 1.4855 |
| CCH-34 | 5.00 % | Δε | -3.1 |
| CCH-35 | 5.00 % | ε‖ | 3.5 |
| CLY-3-O2 | 12.50 % | $\varepsilon_{\parallel}$ | 6.6 |
| CPY-2-O2 | 11.50 % | $\gamma_1$ | 104mPa·s |
| CPY-3-02 | 4.00 % | $K_1$ | 13.7 |
| CY-3-O2 | 15.00 % | $K_3$ | 15.4 |
| PCH-301 | 6.50 % | $K_3/K_1$ | 1.12 |
| PY-1-O2 | 7.00 % | $V_0$ | 2.37 V |

Polymerizable mixture P17 is prepared by adding 0.4% of the polymerizable compound M1 and 50ppm of the stabilizer S3-2 to the nematic LC host mixture N17.

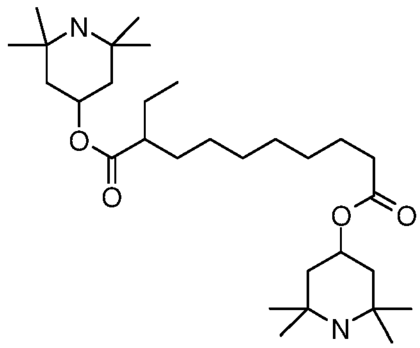

S3-2

Example 18

The nematic LC host mixture N18 is formulated as follows

| | | | |
|---|---|---|---|
| B(S)-2O-O5 | 0.25 % | cl.p. | 74.5°C |
| BCH-32 | 5.50 % | Δn | 0.1028 |
| CC-3-V | 10.00 % | $n_e$ | 1.5880 |
| CC-3-V1 | 7.50 % | $n_o$ | 1.4852 |
| CC-4-V1 | 16.50 % | Δε | -3.1 |
| CCH-35 | 0.25 % | ε‖ | 3.6 |
| CCP-3-1 | 7.50 % | $\varepsilon_{\parallel}$ | 6.7 |
| CCY-3-O2 | 11.00 % | $\gamma_1$ | 96 mPa·s |
| CCY-3-O3 | 1.00 % | $K_1$ | 13.8 |
| CCY-4-O2 | 7.00 % | $K_3$ | 15.5 |
| CCY-5-O2 | 2.00 % | $K_3/K_1$ | 1.12 |
| CY-3-O2 | 9.00 % | $V_0$ | 2.37 V |
| PY-1-O2 | 9.00 % | | |
| PY-2-O2 | 9.00 % | | |
| PY-3-O2 | 4.50 % | | |

Polymerizable mixture P18 is prepared by adding 0.4% of the polymerizable compound M1 and 50ppm of the stabilizer S1-1 to the nematic LC host mixture N18.

Example 19

The nematic LC host mixture N19 is formulated as follows

| | | | |
|---|---|---|---|
| BCH-32 | 4.50 % | cl.p. | 74.8°C |
| CC-3-V | 15.00 % | $\Delta n$ | 0.1030 |
| CC-3-V1 | 7.50 % | $n_e$ | 1.5889 |
| CC-4-V1 | 12.50 % | $n_o$ | 1.4859 |
| CCP-3-1 | 7.00 % | $\Delta\varepsilon$ | -3.1 |
| CCY-3-O1 | 7.00 % | $\varepsilon\|$ | 3.6 |
| CCY-3-O2 | 10.50 % | $\varepsilon_{\|}$ | 6.8 |
| CCY-4-O2 | 6.50 % | $\gamma_1$ | 94 mPa·s |
| CY-3-O2 | 4.50 % | $K_1$ | 13.8 |
| PY-1-O2 | 9.50 % | $K_3$ | 15.4 |
| PY-2-O2 | 9.00 % | $K_3/K_1$ | 1.12 |
| PY-3-O2 | 6.50 % | $V_0$ | 2.35 V |

Polymerizable mixture P19 is prepared by adding 0.4% of the polymerizable compound M2 and 100ppm of the stabilizer S1-1 to the nematic LC host mixture N19.

Example 20

The nematic LC host mixture N20 is formulated as follows

| | | | |
|---|---|---|---|
| CC-3-V | 10.50 % | cl.p. | 74.5°C |
| CC-3-V1 | 5.50 % | $\Delta n$ | 0.1033 |
| CC-4-V1 | 20.00 % | $n_e$ | 1.5875 |
| CCH-34 | 2.00 % | $n_o$ | 1.4842 |
| CCH-35 | 1.50 % | $\Delta\varepsilon$ | -3.3 |
| CCY-3-1 | 2.00 % | $\varepsilon\|$ | 3.6 |
| CCY-3-O1 | 7.50 % | $\varepsilon_{\|}$ | 6.9 |
| CCY-3-O2 | 11.00 % | $\gamma_1$ | 96 mPa·s |
| CCY-4-O2 | 8.50 % | $K_1$ | 14.4 |
| CLY-2-O4 | 1.00 % | $K_3$ | 15.1 |
| CLY-3-O2 | 2.00 % | $K_3/K_1$ | 1.05 |
| PP-1-2V1 | 3.50 % | $V_0$ | 2.29 V |
| PY-1-O2 | 9.50 % | | |
| PY-2-O2 | 9.50 % | | |
| PY-3-O2 | 6.00 % | | |

Polymerizable mixture P20 is prepared by adding 0.4% of the polymerizable compound M3 and 50ppm of the stabilizer S1-1 to the nematic LC host mixture N20.

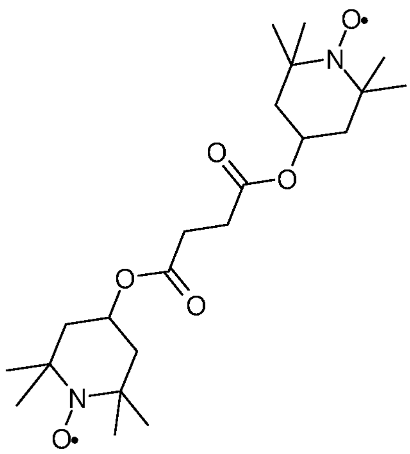

S3-3

Example 21

The nematic LC host mixture N21 is formulated as follows

| | | | |
|---|---|---|---|
| CC-3-V1 | 7.50 % | cl.p. | 74.5°C |
| CC-4-V1 | 20.00 % | Δn | 0.1030 |
| CCH-34 | 5.00 % | $n_e$ | 1.5861 |
| CCH-35 | 7.50 % | $n_o$ | 1.4831 |
| CCP-3-1 | 2.00 % | Δε | -3.5 |
| CCY-3-O1 | 8.00 % | ε\|\| | 3.6 |
| CCY-3-O2 | 12.00 % | $\varepsilon_{\|\|}$ | 7.1 |
| CCY-4-O2 | 3.00 % | $\gamma_1$ | 103 mPa·s |
| CLY-3-O2 | 4.00 % | $K_1$ | 15.1 |
| CY-3-O2 | 1.50 % | $K_3$ | 15.4 |
| PY-1-O2 | 9.50 % | $K_3/K_1$ | 1.02 |
| PY-2-O2 | 9.50 % | $V_0$ | 2.23 V |
| PY-3-O2 | 10.50 % | | |

Polymerizable mixture P21 is prepared by adding 0.4% of the polymerizable compound M1 and 50ppm of the stabilizer S1-1 to the nematic LC host mixture N21.

Example 22

The nematic LC host mixture N22 is formulated as follows

| | | | |
|---|---|---|---|
| CC-3-V1 | 7.50 % | cl.p. | 75°C |
| CC-4-V1 | 19.50 % | Δn | 0.1041 |
| CCH-301 | 5.50 % | $n_e$ | 1.5884 |
| CCH-34 | 5.00 % | $n_o$ | 1.4843 |
| CCP-3-1 | 11.00 % | Δε | -3.1 |
| CLY-3-O2 | 5.00 % | ε\|\| | 3.6 |
| CPY-2-O2 | 6.00 % | $\varepsilon_{\|\|}$ | 6.7 |
| CPY-3-O2 | 11.50 % | $\gamma_1$ | 101 mPa·s |
| CY-3-O2 | 15.00 % | $K_1$ | 14.0 |
| PY-1-O2 | 6.50 % | $K_3$ | 15.7 |
| PY-2-O2 | 7.50 % | $K_3/K_1$ $V_0$ | 1.12 2.37 V |

Polymerizable mixture P22 is prepared by adding 1.0% of the polymerizable compound M1 and 0.6% of the

SA additive SA32 to the nematic LC host mixture N22.

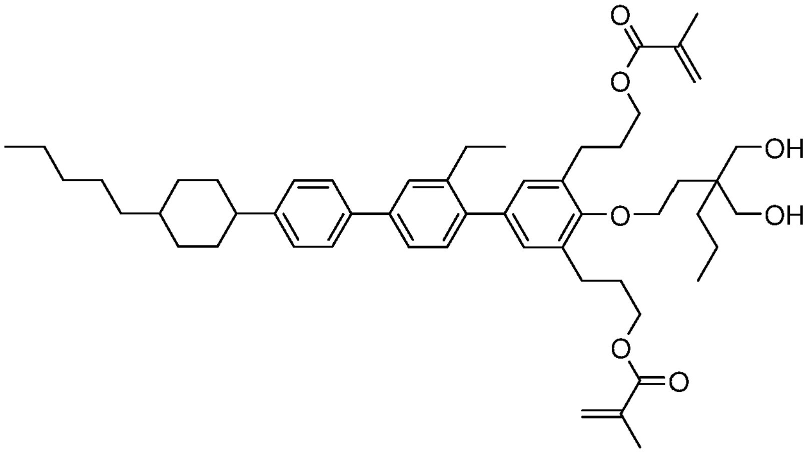

SA32

Example 23

The nematic LC host mixture N23 is formulated as follows

| | | | |
|---|---|---|---|
| CC-3-V1 | 2.50 % | cl.p. | 105.9°C |
| CC-4-V1 | 10.00 % | Δε | -3.6 |
| CCH-301 | 3.00 % | ε‖ | 3.4 |
| CCH-34 | 4.00 % | $\varepsilon_{\parallel}$ | 7.0 |
| CCH-35 | 4.00 % | | |
| CCP-3-1 | 6.00 % | | |
| CCP-3-3 | 6.00 % | | |
| CCY-3-O1 | 4.00 % | | |
| CCY-3-O2 | 4.00 % | | |
| CCY-3-O3 | 4.00 % | | |
| CCY-4-O2 | 4.00 % | | |
| CCY-5-O2 | 4.00 % | | |
| CPY-2-O2 | 10.00 % | | |
| CPY-3-02 | 10.00 % | | |
| CY-3-O2 | 6.50 % | | |
| CY-3-O4 | 10.00 % | | |
| PYP-2-3 | 5.00 % | | |
| PYP-2-4 | 3.00 % | | |

Polymerizable mixture P23 is prepared by adding 0.4% of the polymerizable compound M1 and 50ppm of the stabilizer S1-1 to the nematic LC host mixture N23.

Example 24

The nematic LC host mixture N24 is formulated as follows

| | | | |
|---|---|---|---|
| BCH-52 | 9.00 % | cl.p. | 105°C |
| CC-3-V1 | 2.00 % | Δε | -3.6 |
| CC-4-V1 | 12.50 % | ε‖ | 3.4 |
| CCH-301 | 2.00 % | $\varepsilon_{\parallel}$ | 7.0 |
| CCH-34 | 3.50 % | | |
| CCH-35 | 4.00 % | | |
| CCP-3-1 | 7.50 % | | |

(continued)

| | | |
|---|---|---|
| CCY-3-O1 | 4.00 % | |
| CCY-3-O2 | 4.00 % | |
| CCY-3-O3 | 4.00 % | |
| CCY-4-O2 | 4.00 % | |
| CCY-5-O2 | 4.00 % | |
| CPY-2-O2 | | 10.00 % |
| CPY-3-O2 | | 10.00 % |
| CY-3-O4 | | 12.50 % |
| PY-1-O2 | | 7.00 % |

Polymerizable mixture P24 is prepared by adding 0.4% of the polymerizable compound M1 and 100ppm of the stabilizer S2-1 to the nematic LC host mixture N24.

Example 25

The nematic LC host mixture N25 is formulated as follows

| | | | |
|---|---|---|---|
| B(S)-2O-O5 | 0.25 % | cl.p. | 75.1°C |
| BCH-32 | 1.50 % | $\Delta n$ | 0.1038 |
| CC-3-V1 | 8.00 % | $n_e$ | 1.5864 |
| CC-4-V1 | 20.00 % | $n_o$ | 1.4826 |
| CCH-303 | 1.50 % | $\Delta\varepsilon$ | -3.0 |
| CCH-34 | 6.00 % | $\varepsilon_{\parallel}$ | 3.4 |
| CCH-35 | 8.00 % | $\varepsilon_{\parallel}$ | 6.5 |
| CCY-3-O2 | 9.50 % | $\gamma_1$ | 99 mPa·s |
| CPY-2-O2 | 6.00 % | $K_1$ | 15.6 |
| CPY-3-O2 | 11.00 % | $K_3$ | 16.0 |
| CY-3-O2 | 12.50 % | $K_3/K_1$ | 1.03 |
| PP-1-2V1 | 2.75 % | $V_0$ | 2.44 V |
| PY-1-O2 | 5.50 % | | |
| PY-2-O2 | 4.50 % | | |
| PY-3-O2 | 3.00 % | | |

Polymerizable mixture P25 is prepared by adding 0.4% of the polymerizable compound M2 and 50ppm of the stabilizer S1-1 to the nematic LC host mixture N25.

Example 26

The nematic LC host mixture N26 is formulated as follows

| | | | |
|---|---|---|---|
| BCH-32 | 0.50 % | cl.p. | 74.8°C |
| CC-3-V1 | 7.00 % | $\Delta n$ | 0.1036 |
| CC-4-V1 | 19.50 % | $n_e$ | 1.5884 |
| CCH-301 | 12.00 % | $n_o$ | 1.4848 |
| CCH-34 | 1.50 % | $\Delta\varepsilon$ | -3.1 |
| CCP-3-1 | 9.00 % | $\varepsilon\parallel$ | 3.6 |
| CCY-3-O1 | 1.50 % | $\varepsilon_{\parallel}$ | 6.7 |
| CCY-3-O2 | 9.50 % | $\gamma_1$ | 102 mPa·s |
| CPY-2-O2 | 3.00 % | $K_1$ | 13.8 |
| CPY-3-02 | 11.00 % | $K_3$ | 15.6 |
| CY-3-O2 | 6.50 % | $K_3/K_1$ | 1.13 |
| PY-1-O2 | 9.00 % | $V_0$ | 2.39 V |

(continued)

| | |
|---|---|
| PY-2-O2 | 9.00 % |
| PY-3-O2 | 1.00 % |

Polymerizable mixture P26 is prepared by adding 0.4% of the polymerizable compound M1 and 50ppm of the stabilizer S3-1 to the nematic LC host mixture N26.

Example 27

The nematic LC host mixture N27 is formulated as follows

| | | | |
|---|---|---|---|
| B-2O-O5 | 4.00 % | cl.p. | 74.2°C |
| BCH-32 | 8.00 % | $\Delta n$ | 0.1091 |
| CC-3-V1 | 9.00 % | $n_e$ | 74.2 |
| CCH-301 | 2.00 % | $n_o$ | 1.4862 |
| CCH-34 | 8.00 % | $\Delta\varepsilon$ | -3.1 |
| CCH-35 | 7.00 % | $\varepsilon\|$ | 3.6 |
| CCP-3-1 | 8.00 % | $\varepsilon_{\|}$ | 6.7 |
| CCP-V2-1 | 5.00 % | $\gamma_1$ | 108 mPa·s |
| CCY-3-O2 | 10.50 % | $K_1$ | 14.5 |
| CLY-3-O2 | 1.00 % | $K_3$ | 16.5 |
| CPY-3-02 | 2.50 % | $K_3/K_1$ | 1.14 |
| CY-3-O2 | 11.50 % | $V_0$ | 2.41 V |
| PCH-301 | | | 5.50 % |
| PY-3-O2 | | | 18.00 % |

Polymerizable mixture P27 is prepared by adding 0.3% of the polymerizable compound M1 and 50ppm of the stabilizer S3-3 to the nematic LC host mixture N27.

Example 28

The nematic LC host mixture N28 is formulated as follows

| | | | |
|---|---|---|---|
| CC-3-V1 | 3.00 % | cl.p. | 74.8°C |
| CCH-301 | 9.00 % | $\Delta n$ | 0.0891 |
| CCH-303 | 5.00 % | $n_e$ | 1.5681 |
| CCH-34 | 9.00 % | $n_o$ | 1.4790 |
| CCH-35 | 9.00 % | $\Delta\varepsilon$ | -3.2 |
| CCP-3-1 | 8.00 % | $\varepsilon\|$ | 3.5 |
| CCY-3-O2 | 11.50 % | $\varepsilon_{\|}$ | 6.7 |
| CCY-5-O2 | 9.00 % | $\gamma_1$ | 115 mPa·s |
| CPY-3-02 | 6.00 % | $K_1$ | 14.2 |
| CY-3-O2 | 15.00 % | $K_3$ | 16.3 |
| PCH-301 | 4.50 % | $K_3/K_1$ | 1.15 |
| PY-3-O2 | 11.00 % | $V_0$ | 2.38 V |

Polymerizable mixture P28 is prepared by adding 0.3% of the polymerizable compound M3 and 50ppm of the stabilizer S2-1 to the nematic LC host mixture N28.

Example 29

The nematic LC host mixture N29 is formulated as follows

| | | | |
|---|---|---|---|
| BCH-32 | 10.50 % | cl.p. | 74.5°C |
| CCH-34 | 9.00 % | Δn | 0.1090 |
| CCH-35 | 9.00 % | $n_e$ | 1.5953 |
| CCP-3-1 | 8.00 % | $n_o$ | 1.4863 |
| CCY-3-O2 | 9.50 % | $\Delta_\varepsilon$ | -3.4 |
| CCY-4-O2 | 5.50 % | ε∥ | 3.7 |
| CPY-3-O2 | 5.50 % | $\varepsilon_{\parallel}$ | 7.0 |
| CY-3-O2 | 15.00 % | $\gamma_1$ | 128 mPa·s |
| CY-5-O2 | 5.00 % | $K_1$ | 14.0 |
| PCH-301 | 7.00 % | $K_3$ | 15.7 |
| PY-3-O2 | 16.00 % | $K_3/K_1$ | 1.12 |
| | | $V_0$ | 2.25 V |

Polymerizable mixture P29 is prepared by adding 0.4% of the polymerizable compound M1 and 50ppm of the stabilizer S1-1 to the nematic LC host mixture N29.

Example 30

The nematic LC host mixture N30 is formulated as follows

| | | | |
|---|---|---|---|
| B(S)-2O-O5 | 4.00 % | cl.p. | 74.7°C |
| BCH-32 | 5.00 % | Δn | 0.1024 |
| CC-3-V1 | 6.00 % | $n_e$ | 1.5885 |
| CCH-34 | 9.00 % | $n_o$ | 1.4861 |
| CCH-35 | 9.00 % | Δε | -3.2 |
| CCP-3-1 | 8.00 % | ε∥ | 3.6 |
| CCY-3-O1 | 6.50 % | $\varepsilon_{\parallel}$ | 6.7 |
| CCY-3-O2 | 9.00 % | $\gamma_1$ | 109 mPa·s |
| CLY-3-O2 | 1.00 % | $K_1$ | 13.5 |
| CPY-3-O2 | 4.50 % | $K_3$ | 16.5 |
| CY-3-O2 | 13.00 % | $K_3/K_1$ | 1.22 |
| PCH-301 | 15.00 % | $V_0$ | 2.39 V |
| PY-1-O2 | 8.00 % | | |
| PY-2-O2 | 2.00 % | | |

Polymerizable mixture P30 is prepared by adding 0.3% of the polymerizable compound M1 and 50ppm of the stabilizer S1-1 to the nematic LC host mixture N30.

Example 31

The nematic LC host mixture N31 is formulated as follows

| | | | |
|---|---|---|---|
| CCH-301 | 9.00 % | cl.p. | 110.9°C |
| CCH-34 | 9.00 % | Δn | 0.1022 |
| CCH-35 | 8.00 % | $n_e$ | 1.5867 |
| CCOC-4-3 | 3.00 % | $n_o$ | 1.4845 |
| CCP-3-1 | 6.00 % | Δε | -3.0 |
| CCP-3-3 | 6.00 % | ε∥ | 3.3 |
| CCPC-33 | 3.00 % | $\varepsilon_{\parallel}$ | 6.3 |
| CCY-3-1 | 3.50 % | $\gamma_1$ | 199 mPa-s |
| CCY-3-O2 | 4.50 % | $K_1$ | 18.8 |
| CCY-3-O3 | 6.00 % | $K_3$ | 19.6 |

(continued)

| | | | |
|---|---|---|---|
| CCY-4-O2 | 6.00 % | $K_3/K_1$ | 1.04 |
| CCY-5-O2 | 5.00 % | $V_0$ | 2.69 V |
| CPY-2-O2 | 10.50 % | | |
| CPY-3-02 | 6.50 % | | |
| CY-3-O2 | 1.00 % | | |
| PCH-302 | 4.00 % | | |
| PY-2-O2 | 9.00 % | | |

Polymerizable mixture P31 is prepared by adding 1.0% of the polymerizable compound M1 and 0.6% of the SA additive SA23 to the nematic LC host mixture N31.

Example 32

The nematic LC host mixture N32 is formulated as follows

| | | | |
|---|---|---|---|
| BCH-32 | 3.00 % | cl.p. | 109.8°C |
| CCH-301 | 9.00 % | $\Delta n$ | 0.1020 |
| CCH-34 | 9.00 % | $n_e$ | 1.5867 |
| CCH-35 | 2.50 % | $n_o$ | 1.4847 |
| CCOC-4-3 | 3.00 % | $\Delta_\varepsilon$ | -3.0 |
| CCP-3-1 | 6.00 % | $\varepsilon_{\|\|}$ | 3.3 |
| CCP-3-3 | 5.00 % | $\varepsilon_{\|}$ | 6.2 |
| CCY-3-1 | 3.00 % | $\gamma_1$ | 204 mPa·s |
| CCY-3-O2 | 6.00 % | $K_1$ | 18.4 |
| CCY-3-O3 | 6.00 % | $K_3$ | 20.3 |
| CCY-4-O2 | 6.00 % | $K_3/K_1$ | 1.10 |
| CCY-5-O2 | 6.00 % | $V_0$ | 2.75 V |
| CPY-2-O2 | 10.00 % | | |
| CPY-3-O2 | 8.50 % | | |
| CY-3-O2 | 6.00 % | | |
| PCH-302 | 11.00 % | | |

Polymerizable mixture P32 is prepared by adding 1.0% of the polymerizable compound M1, 0.6% of the SA additive SA23 and 50ppm of the stabilizer S3-3 to the nematic LC host mixture N32.

Example 33

The nematic LC host mixture N33 is formulated as follows

| | | | |
|---|---|---|---|
| B(S)-2O-O5 | 2.00 % | cl.p. | 74.3°C |
| BCH-32 | 9.50 % | $\Delta n$ | 0.1080 |
| CC-3-V1 | 6.50 % | $n_e$ | 1.5962 |
| CCH-301 | 8.50 % | $n_o$ | 1.4882 |
| CCH-34 | 3.00 % | $\Delta\varepsilon$ | -3.3 |
| CCP-3-1 | 9.50 % | $\varepsilon\|\|$ | 3.7 |
| CCY-3-O1 | 6.50 % | $\varepsilon_{\|}$ | 7.0 |
| CCY-5-O2 | 9.50 % | $\gamma_1$ | 121 mPa·s |
| CLY-3-O2 | 1.00 % | $K_1$ | 12.9 |
| CPY-3-O2 | 5.50 % | $K_3$ | 15.9 |
| CY-3-O2 | 15.50 % | $K_3/K_1$ | 1.23 |
| PCH-301 | 5.00 % | $V_0$ | 2.31 V |
| PCH-302 | 6.50 % | | |

(continued)

| | |
|---|---|
| PY-2-O2 | 11.50 % |

Polymerizable mixture P33 is prepared by adding 1.0% of the polymerizable compound M1, 0.6% of the SA additive SA32 and 50ppm of the stabilizer S3-1 to the nematic LC host mixture N33.

Example 34

The nematic LC host mixture N34 is formulated as follows

| | | | |
|---|---|---|---|
| BCH-32 | 6.50 % | cl.p. | 74.7 °C |
| CC-3-V1 | 8.00 % | $\Delta n$ | 0.1039 |
| CCH-23 | 17.00 % | $\Delta\varepsilon$ | -3.0 |
| CCH-34 | 6.50 % | $\varepsilon_{\parallel}$ | 3.4 |
| CCY-3-O1 | 3.50 % | $K_3/K_1$ | 1.07 |
| CCY-3-O2 | 12.50 % | $\gamma_1$ | 106 mPa s |
| CPY-2-O2 | 5.50 % | $V_0$ | 2.43 V |
| CPY-3-O2 | 10.00 % | | |
| CY-3-O2 | 15.50 % | | |
| PCH-3O1 | 4.50 % | | |
| PP-1-2V1 | 5.00 % | | |
| PY-3-O2 | 5.50 % | | |

Polymerizable mixture P34 is prepared by adding 1.0% of the polymerizable compound M1, 0.6% of the SA additive SA32 and 50ppm of the stabilizer S3-2 to the nematic LC host mixture N34.

Example 35

The nematic LC host mixture N35 is formulated as follows

| | | | |
|---|---|---|---|
| BCH-32 | 2.00 % | cl.p. | 74.7 °C |
| CC-3-V | 22.50 % | $\Delta n$ | 0.1039 |
| CC-3-V1 | 9.50 % | $\Delta\varepsilon$ | -3.0 |
| CCP-3-1 | 3.00 % | $\varepsilon_{\parallel}$ | 3.5 |
| CCY-3-O2 | 3.50 % | $K_3/K_1$ | 1.17 |
| CCY-4-O2 | 4.00 % | $\gamma_1$ | 99 mPa s |
| CPY-2-O2 | 12.00 % | $V_0$ | 2.39 |
| CPY-3-O2 | | | 12.50 % |
| CY-3-O2 | | | 15.50 % |
| CY-3-O4 | | | 4.00 % |
| PCH-3O1 | | | 7.00 % |
| PP-1-2V1 | | | 1.50 % |
| PYP-2-3 | | | 3.00 % |

Polymerizable mixture P35 is prepared by adding 1.0% of the polymerizable compound M2, 0.6% of the SA additive SA23 and 50ppm of the stabilizer S3-3 to the nematic LC host mixture N35.

Example 36

The nematic LC host mixture N36 is formulated as follows

| | | | |
|---|---|---|---|
| CY-3-O4 | 12.00 % | cl.p. | 77°C |
| PY-3-O2 | 9.00 % | $\Delta n$ | 0.088 |

(continued)

| | | | |
|---|---|---|---|
| CPY-3-O2 | 12.00 % | Δε | -3.1 |
| CCOY-2-O2 | 8.00 % | | |
| CCY-5-O2 | 10.00 % | | |
| CC-3-V | 20.00 % | | |
| CCH-32 | 30.00 % | | |

Polymerizable mixture P36 is prepared by adding 1.0% of the polymerizable compound M1, 0.6% of the SA additive SA23 and 50ppm of the stabilizer S1-1 to the nematic LC host mixture N36.

Example 37

The nematic LC host mixture N37 is formulated as follows

| | | | |
|---|---|---|---|
| CY-3-O4 | 12.00 % | cl.p. | 77°C |
| PY-3-O2 | 9.00 % | Δn | 0.088 |
| CPY-3-O2 | 12.00 % | Δε | -3.1 |
| CCOY-2-O2 | 8.00 % | | |
| CCY-5-O2 | 10.00 % | | |
| CC-3-V | | | 20.00 % |
| CCH-32 | | | 30.00 % |

Polymerizable mixture P37 is prepared by adding 1.0% of the polymerizable compound M3, 0.6% of the SA additive SA23 and 50ppm of the stabilizer S1-1 to the nematic LC host mixture N37.

Example 38

The nematic LC host mixture N38 is formulated as follows

| | | | |
|---|---|---|---|
| CCH-32 | 10.00 % | cl.p. | 86°C |
| COY-3-O2 | 10.00 % | Δn | 0.105 |
| COY-3-O1 | 10.00 % | Δε | -5.9 |
| CCOY-2-O2 | 9.00 % | | |
| CCY-3-O1 | 7.00 % | | |
| CCY-3-O2 | 6.00 % | | |
| CCY-4-O2 | 6.00 % | | |
| CPY-5-O2 | 8.00 % | | |
| CPY-3-O1cpr | 10.00 % | | |
| CPY-2-O2 | 10.00 % | | |
| CY-3-O2 | 7.00 % | | |
| CY-3-O4 | 7.00 % | | |

Polymerizable mixture P38 is prepared by adding 1.0% of the polymerizable compound M1, 0.6% of the SA additive SA32 and 50ppm of the stabilizer S3-3 to the nematic LC host mixture N38.

Example 39

The nematic LC host mixture N39 is formulated as follows

| | | | |
|---|---|---|---|
| CCH-32 | 11.00 % | cl.p. | 79°C |
| CC-3-V | 10.00 % | Δn | 0.112 |
| PP-5-O2 | 5.00 % | Δε | -4.3 |
| COY-3-O2 | 8.00 % | | |

(continued)

| | |
|---|---|
| COY-3-O1 | 7.00 % |
| CCOY-2-O2 | 13.00 % |
| CPY-cp-O2 | 7.00 % |
| CPY-3-O2 | 10.00 % |
| CPY-2-O2 | 10.00 % |
| PY-3-O2 | 10.00 % |
| CCP-3-1 | 2.00 % |
| CCP-V-1 | 4.00 % |
| CCP-V2-1 | 4.00 % |

Polymerizable mixture P39 is prepared by adding 1.0% of the polymerizable compound M1, 0.6% of the SA additive SA23 and 50ppm of the stabilizer S3-2 to the nematic LC host mixture N39.

Example 40

The nematic LC host mixture N40 is formulated as follows

| | | | |
|---|---|---|---|
| CY-5-O2 | 11.00 % | cl.p. | 60°C |
| PY-3-O2 | 9.00 % | Δn | 0.097 |
| COY-3-O2 | 17.00 % | Δε | -2.8 |
| B(S)-cp1O-O4 | 4.00 % | | |
| PP-1-5 | 10.00 % | | |
| CC-3-V1 | 26.00 % | | |
| CCH-32 | 5.00 % | | |
| CCP-3-1 | 12.00 % | | |
| BCH-32 | 6.00 % | | |

Polymerizable mixture P40 is prepared by adding 1.0% of the polymerizable compound M1, 0.6% of the SA additive SA32 and 50ppm of the stabilizer S3-3 to the nematic LC host mixture N40.

Example 41

The nematic LC host mixture N41 is formulated as follows

| | | | |
|---|---|---|---|
| CCH-23 | 16.50 % | cl.p. | 75°C |
| CCH-34 | 3.00 % | Δn | 0.112 |
| PCH-3O1 | 15.00 % | Δε | -3.0 |
| PP-1-3 | 9.00 % | | |
| BCH-32 | 8.00 % | | |
| COY-3-O1 | 8.50 % | | |
| CCOY-3-O2 | 17.00 % | | |
| CPY-2-O2 | 6.50 % | | |
| CPY-3-O2 | 8.00 % | | |
| CPY-3-O4 | 8.50 % | | |

Polymerizable mixture P41 is prepared by adding 1.0% of the polymerizable compound M1, 0.6% of the SA additive SA32 and 50ppm of the stabilizer S1-1 to the nematic LC host mixture N41.

Example 42

The nematic LC host mixture N42 is formulated as follows

| | | | |
|---|---|---|---|
| CCH-23 | 12.00 % | cl.p. | 111°C |
| CCH-34 | 8.00 % | Δn | 0.097 |
| CCH-35 | 7.00 % | Δε | -3.1 |
| PCH-3O1 | 8.00 % | | |
| CCP-3-1 | 7.00 % | | |
| CCP-3-3 | 4.00 % | | |
| BCH-32 | 5.00 % | | |
| CCOY-2-O2 | 15.00 % | | |
| CCOY-3-O2 | 15.00 % | | |
| CPY-2-O2 | 5.00 % | | |
| CPY-3-O2 | 5.00 % | | |
| CPY-3-O3 | 5.00 % | | |
| CPY-3-O4 | 4.00 % | | |

Polymerizable mixture P42 is prepared by adding 1.0% of the polymerizable compound M2, 0.6% of the SA additive SA32 and 50ppm of the stabilizer S2-1 to the nematic LC host mixture N42.

Example 43

The nematic LC host mixture N43 is formulated as follows

| | | | |
|---|---|---|---|
| CC-3-V | 32.00 % | cl.p. | 74°C |
| PP-1-3 | 11.00 % | Δn | 0.104 |
| CCP-3-1 | 8.00 % | Δε | -2.9 |
| CY-5-O2 | 2.00 % | | |
| COY-3-O1 | 11.50 % | | |
| CCY-3-O2 | 11.50 % | | |
| CPY-2-O2 | 7.00 % | | |
| CPY-3-O2 | 8.00 % | | |
| CPY-3-O4 | 9.00 % | | |

Polymerizable mixture P43 is prepared by adding 1.0% of the polymerizable compound M1, 0.6% of the SA additive SA23 and 50ppm of the stabilizer S3-2 to the nematic LC host mixture N43.

Example 44

The nematic LC host mixture N44 is formulated as follows

| | | | |
|---|---|---|---|
| CCH-23 | 21.50 % | cl.p. | 75°C |
| CCH-34 | 9.50 % | Δn | 0.103 |
| PP-1-3 | 13.50 % | Δε | -2.8 |
| CCP-3-1 | 6.00 % | | |
| COY-3-O1 | 11.50 % | | |
| CCOY-3-O2 | 14.00 % | | |
| CPY-2-O2 | 7.00 % | | |
| CPY-3-O2 | 8.00 % | | |
| CPY-3-O4 | 9.00 % | | |

Polymerizable mixture P44 is prepared by adding 1.0% of the polymerizable compound M3, 0.6% of the SA additive SA23 and 50ppm of the stabilizer S3-3 to the nematic LC host mixture N44.

Example 45

The nematic LC host mixture N45 is formulated as follows

| | | | |
|---|---|---|---|
| CEY-3-O2 | 7.00 % | cl.p. | 89°C |
| CCY-3-O2 | 8.00 % | Δn | 0.115 |
| CCOY-3-O2 | 5.00 % | Δε | -1.9 |
| CLY-2-O2 | 8.00 % | | |
| CAIY-3-O2 | 3.00 % | | |
| CAIY-5-O2 | 4.00 % | | |
| PYP-2-3 | 7.00 % | | |
| PYP-2-4 | 7.00 % | | |
| CC-4-V | 15.00 % | | |
| CC-3-V1 | 6.00 % | | |
| CC-1-2V1 | 6.00 % | | |
| CC-3-2V1 | 4.00 % | | |
| PP-1-2V | 5.00 % | | |
| PP-1-2V1 | 5.00 % | | |
| CCP-3-1 | 6.00 % | | |
| CBC-33F | 4.00 % | | |

Polymerizable mixture P45 is prepared by adding 1.0% of the polymerizable compound M1, 0.6% of the SA additive SA32 and 50ppm of the stabilizer S3-1 to the nematic LC host mixture N45.

Example 46

The nematic LC host mixture N46 is formulated as follows

| | | | |
|---|---|---|---|
| B(S)-2O-O5 | 2.00 % | cl.p. | 74°C |
| BCH-32 | 9.50 % | Δn | 0.108 |
| CCP-3-1 | 9.50 % | Δε | -3.6 |
| CCY-3-O1 | | | 6.50 % |
| CCY-5-O2 | | | 9.50 % |
| CLY-3-O2 | | | 1.00 % |
| CPY-3-O2 | | | 5.50 % |
| CC-3-V1 | | | 6.50 % |
| CCH-301 | | | 8.50 % |
| CCH-34 | | | 3.00 % |
| COY-3-O2 | | | 15.50 % |
| PCH-3O1 | | | 5.00 % |
| PCH-3O2 | | | 6.50 % |
| PY-2-O2 | | | 11.50 % |

Polymerizable mixture P46 is prepared by adding 1.0% of the polymerizable compound M2, 0.6% of the SA additive SA32 and 50ppm of the stabilizer S2-1 to the nematic LC host mixture N46.

Example 47

The nematic LC host mixture N47 is formulated as follows

| | | | |
|---|---|---|---|
| B(S)-2O-O4 | 4.0 % | cl.p. | 75°C |
| B(S)-2O-O4 | 4.0 % | Δn | 0.114 |
| BCH-32 | 7.5 % | $n_e$ | 1.606 |

(continued)

| | | | |
|---|---|---|---|
| CC-3-V | 25.75 % | $n_o$ | 1.492 |
| CC-3-V1 | 10.0 % | Δε | -2.6 |
| CCP-3-1 | 13.0 % | $\varepsilon_{\|}$ | 3.6 |
| CCP-3-3 | 3.25 % | $\varepsilon_{\|}$ | 6.1 |
| CLY-3-O2 | 2.0 % | $K_1$ | 13.7 |
| CPY-2-O2 | 9.5 % | $K_3$ | 14.2 |
| PY-2-O2 | 11.0 % | | |
| PY-2-O1 | 10.0 % | | |

Polymerizable mixture P47 is prepared by adding 1.0% of the polymerizable compound M1, 0.6% of the SA additive SA32 and 50ppm of the stabilizer S3-3 to the nematic LC host mixture N47.

Example 48

The nematic LC host mixture N48 is formulated as follows

| | | | |
|---|---|---|---|
| BCH-32 | 7.50 % | cl.p. | 75.5°C |
| CC-3-V1 | 6.50 % | Δn | 0.1105 |
| CCH-34 | 8.00 % | $n_e$ | 1.5970 |
| CCH-35 | 8.00 % | $n_o$ | 1.4865 |
| CCY-3-O2 | 12.00 % | Δε | -3.3 |
| CPY-2-O2 | 9.50 % | $\varepsilon_{\|}$ | 3.5 |
| CPY-3-O2 | 11.00 % | $\varepsilon_{\|}$ | 6.8 |
| CY-3-O2 | 12.00 % | $\gamma_1$ | 130 mPa·s |
| CY-5-O2 | 13.00 % | $K_1$ | 14.2 |
| PCH-301 | 4.00 % | $K_3$ | 15.4 |
| PP-1-4 | 8.50 % | $K_3/K_1$ | 1.08 |
| | | $V_0$ | 2.28 V |

Polymerizable mixture P48 is prepared by adding 0.4% of the polymerizable compound M1 to the nematic LC host mixture N48.

Example 49

Polymerizable mixture P49 is prepared by adding 0.2% of the polymerizable compound RM-1 and 0.5% of the polymerizable compound M1 to the nematic LC host mixture N4.

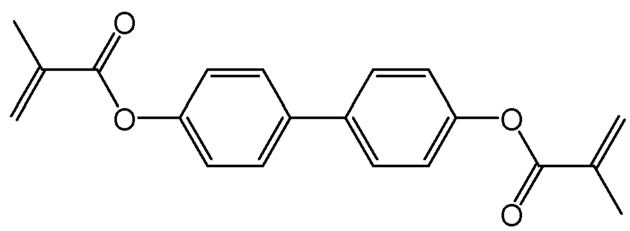

RM-1

Example 50

Polymerizable mixture P50 is prepared by adding 0.2% of the polymerizable compound RM-1, 0.5% of the polymerizable compound M1 and 100ppm of the stabilizer S1-1 to the nematic LC host mixture N6.

Example 51

Polymerizable mixture P51 is prepared by adding 0.2% of the polymerizable compound RM-1, 0.5% of the polymerizable compound M1 and 100ppm of the stabilizer S1-1 to the nematic LC host mixture N7.

Example 52

Polymerizable mixture P52 is prepared by adding 0.2% of the polymerizable compound RM-1 and 0.5% of the polymerizable compound M1 to the nematic LC host mixture N10.

Example 53

Polymerizable mixture P53 is prepared by adding 0.3% of the polymerizable compound RM-1, 0.5% of the polymerizable compound M1 and 100ppm of the stabilizer S1-1 to the nematic LC host mixture N11.

Example 54

Polymerizable mixture P54 is prepared by adding 0.2% of the polymerizable compound RM-1 and 0.5% of the polymerizable compound M1 to the nematic LC host mixture N16.

Example 55

Polymerizable mixture P55 is prepared by adding 0.3% of the polymerizable compound RM-1, 0.5% of the polymerizable compound M1 and 100ppm of the stabilizer S1-1 to the nematic LC host mixture N23.

Example 56

Polymerizable mixture P56 is prepared by adding 0.3% of the polymerizable compound RM-1, 0.5% of the polymerizable compound M1 and 100ppm of the stabilizer S1-1 to the nematic LC host mixture N25.

Example 57

Polymerizable mixture P57 is prepared by adding 0.3% of the polymerizable compound RM-1, 0.5% of the polymerizable compound M1 and 100ppm of the stabilizer S1-1 to the nematic LC host mixture N34.

Example 58

Polymerizable mixture P58 is prepared by adding 0.3% of the polymerizable compound RM-1, 0.5% of the polymerizable compound M1 and 100ppm of the stabilizer S1-1 to the nematic LC host mixture N41.

Example 59

Polymerizable mixture P59 is prepared by adding 0.3% of the polymerizable compound RM-1, 0.5% of the polymerizable compound M1 and 100ppm of the stabilizer S1-1 to the nematic LC host mixture N45.

Example 60

Polymerizable mixture P60 is prepared by adding 0.3% of the polymerizable compound RM-1, 0.5% of the polymerizable compound M3 and 100ppm of the stabilizer S1-1 to the nematic LC host mixture N45.

Example 61

Polymerizable mixture P61 is prepared by adding 0.3% of the polymerizable compound RM-1, 0.5% of the polymerizable compound M2 and 100ppm of the stabilizer S1-1 to the nematic LC host mixture N1.

Example 62

Polymerizable mixture P62 is prepared by adding 0.3% of the polymerizable compound RM-1, 0.5% of the

polymerizable compound M3 and 100ppm of the stabilizer S1-1 to the nematic LC host mixture N2.

Example 63

Polymerizable mixture P63 is prepared by adding 0.3% of the polymerizable compound RM-1, 0.5% of the polymerizable compound M2 and 100ppm of the stabilizer S1-1 to the nematic LC host mixture N4.

Example 64

Polymerizable mixture P64 is prepared by adding 0.2% of the polymerizable compound RM-17, 0.5% of the polymerizable compound M1 and 100ppm of the stabilizer S1-1 to the nematic LC host mixture N1.

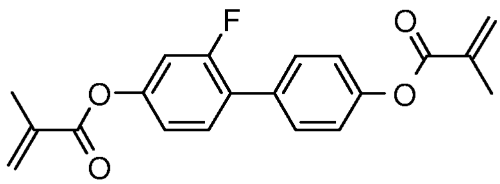

RM-17

Example 65

Polymerizable mixture P65 is prepared by adding 0.3% of the polymerizable compound RM-19, 0.5% of the polymerizable compound M1 and 100ppm of the stabilizer S1-1 to the nematic LC host mixture N2.

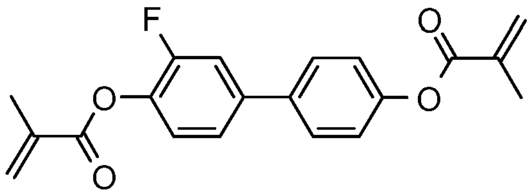

RM-19

Example 66

Polymerizable mixture P66 is prepared by adding 0.2% of the polymerizable compound RM-64, 0.5% of the polymerizable compound M1 and 100ppm of the stabilizer S1-1 to the nematic LC host mixture N1.

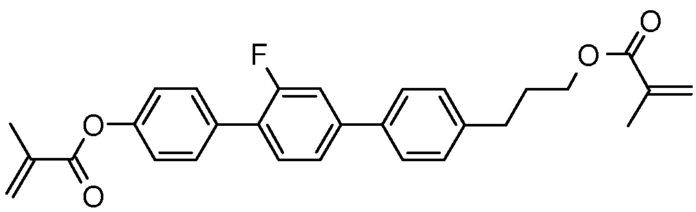

RM-64

Example 67

Polymerizable mixture P67 is prepared by adding 0.2% of the polymerizable compound RM-64, 0.5% of the polymerizable compound M2 and 100ppm of the stabilizer S1-1 to the nematic LC host mixture N1.

Example 68

Polymerizable mixture P68 is prepared by adding 0.2% of the polymerizable compound RM-139, 0.3% of the polymerizable compound M1 and 100ppm of the stabilizer S1-1 to the nematic LC host mixture N1.

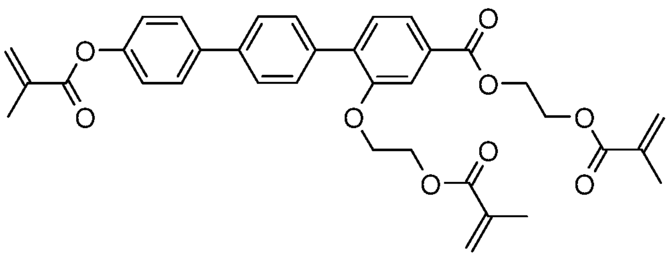

RM-139

Example 69

Polymerizable mixture P69 is prepared by adding 0.2% of the polymerizable compound RM-142, 0.3% of the polymerizable compound M1 and 100ppm of the stabilizer S1-1 to the nematic LC host mixture N1.

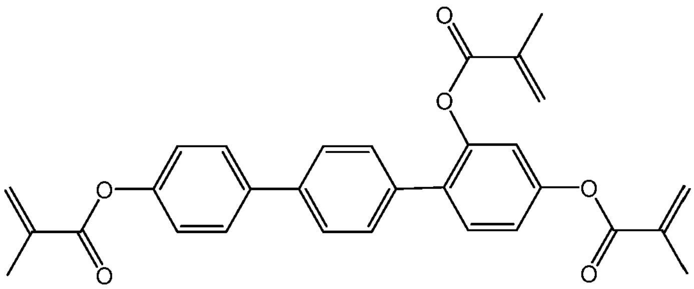

RM-142

Example 70

Polymerizable mixture P70 is prepared by adding 0.2% of the polymerizable compound RM-142, 0.3% of the polymerizable compound M2 and 100ppm of the stabilizer S1-1 to the nematic LC host mixture N1.

Example 71

Polymerizable mixture P71 is prepared by adding 0.2% of the polymerizable compound RM-139, 0.3% of the polymerizable compound M3 and 100ppm of the stabilizer S1-1 to the nematic LC host mixture N1.

Example 72

Polymerizable mixture P72 is prepared by adding 0.2% of the polymerizable compound RM-142, 0.3% of the polymerizable compound M3 and 100ppm of the stabilizer S1-1 to the nematic LC host mixture N2.

Example 73

Polymerizable mixture P73 is prepared by adding 0.2% of the polymerizable compound RM-120, 0.3% of the polymerizable compound M1 and 100ppm of the stabilizer S1-1 to the nematic LC host mixture N1.

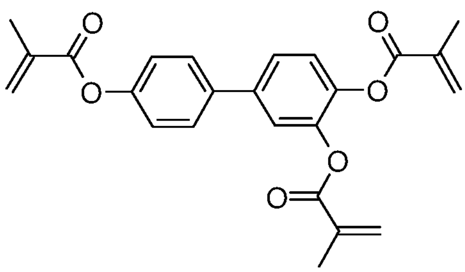

RM-120

Example 74

Polymerizable mixture P74 is prepared by adding 0.2% of the polymerizable compound RM-120, 0.3% of the polymerizable compound M2 and 100ppm of the stabilizer S1-1 to the nematic LC host mixture N2.

Example 75

Polymerizable mixture P75 is prepared by adding 0.2% of the polymerizable compound RM-120, 0.3% of the polymerizable compound M3 and 100ppm of the stabilizer S1-1 to the nematic LC host mixture N4.

Example 76

Polymerizable mixture P76 is prepared by adding 0.1% of the polymerizable compound RM-150, 0.4% of the polymerizable compound M1 and 100ppm of the stabilizer S1-1 to the nematic LC host mixture N1.

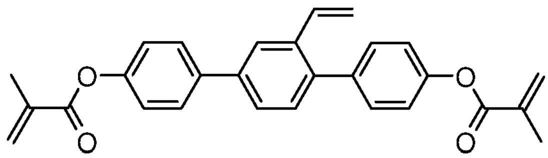

RM-150

Example 77

Polymerizable mixture P77 is prepared by adding 0.05% of the polymerizable compound RM-150, 0.3% of the polymerizable compound M2 and 50ppm of the stabilizer S1-1 to the nematic LC host mixture N3.

Example 78

Polymerizable mixture P78 is prepared by adding 0.1% of the polymerizable compound RM-150, 0.3% of the polymerizable compound M2 and 50ppm of the stabilizer S1-1 to the nematic LC host mixture N4.

Example 79

Polymerizable mixture P79 is prepared by adding 0.05% of the polymerizable compound RM-154, 0.3% of the polymerizable compound M1 and 100ppm of the stabilizer S1-1 to the nematic LC host mixture N1.

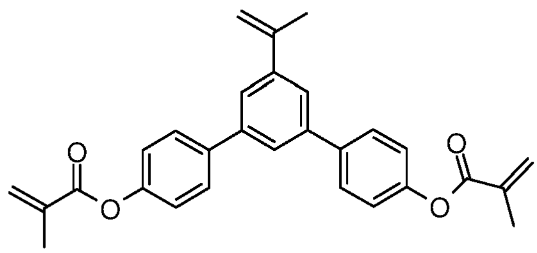

RM-154

Example 80

Polymerizable mixture P80 is prepared by adding 0.05% of the polymerizable compound RM-154, 0.3% of the polymerizable compound M1 and 50ppm of the stabilizer S1-1 to the nematic LC host mixture N3.

Example 81

Polymerizable mixture P81 is prepared by adding 0.1% of the polymerizable compound RM-154, 0.3% of the polymerizable compound M2 and 100ppm of the stabilizer S1-1 to the nematic LC host mixture N4.

Use Example A

A1, Comparison of Physical Properties

The absorption wavelength λ at an extinction coefficient of E = 0.5 is determined for polymerizable compound M1 and for compounds RM-1 and RM-35 in a solution in DCM at a concentration of 3g/L or 5g/L respectively.
The absorption wavelength is useful to characterize the wavelength dependence of the UV photopolymerization of the compound.

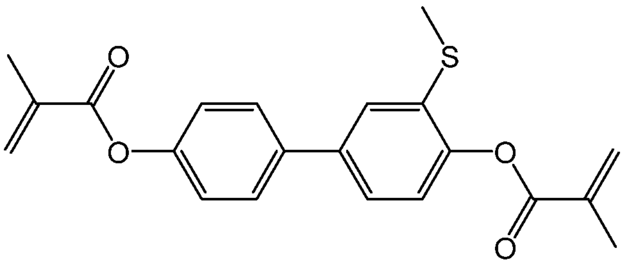

M1

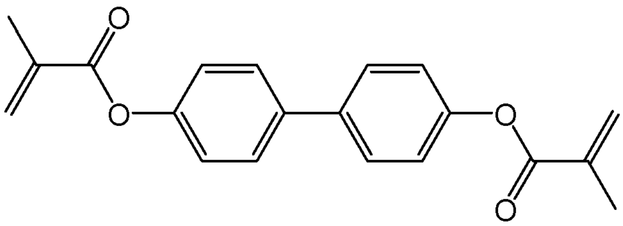

RM-1

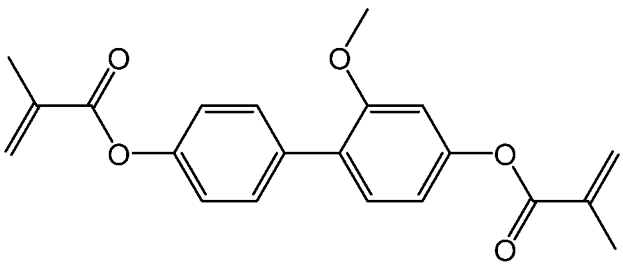

RM-35

The melting point and UV absorption wavelength of polymerizable compound M1 according to the invention and reference compounds RM-1 and RM-35 according to prior art are summarized in Table 1.

Table 1 - Melting point and UV Absorption

| | RM-1 | RM-35 | M1 |
|---|---|---|---|
| Melting point (°C) | 152 | 105 | 76 |
| UV absorption wavelength λ (nm) at E=0.5 (3.0g/L in DCM) | 320 | 330 | 337 |

From Table 1 it can be seen that polymerizable compound M1 according to the invention has the lowest melting point, This is especially advantageous as it indicates that the monomer dissolves faster (leading to shorter production cycles) and has higher solubility in the LC medium compared with RM-1 and RM-35.
From Table 1 it can also be seen that polymerizable compound M1 according to the invention has the longest absorption wavelength, and is thus especially suitable for UV photopolymerization at longer wavelengths or faster polymerization at shorter wavelengths.

A2) Polymerizable Mixtures

Polymerizable mixtures according to the invention are prepared by adding the polymerizable compound M1

and optionally the polymerizable compound RM-1 to nematic LC host mixtures N1, N2 and chiral nematic LC host mixture C3. Polymerizable reference mixtures are prepared by adding the polymerizable compound RM-1 or RM-35 to nematic LC host mixtures N1, N2 and chiral nematic LC host mixture C3.

The polymerizable mixture compositions are shown in Table 1. Therein, P1-1, P1-2, P1-3, P2-1, P2-2, P2-3, P2-4, P3-1, P3-2, P3-3 and P3-4 are mixtures according to the present invention. Mixtures C1-1, C1-2, C2-1, C2-2, C3-1 and C3-2 are reference mixtures.

Table 2 - Polymerizable mixture compositions

| Cone. (wt. %) | Host mixture | | | Monomer | | |
|---|---|---|---|---|---|---|
| | N1 | N2 | C3 | RM-1 | RM-35 | M1 |
| C1-1 | 99.7 | - | - | 0.3 | - | - |
| C1-2 | 99.65 | - | - | - | 0.35 | - |
| P1-1 | 99.8 | - | - | - | - | 0.2 |
| P1-2 | 99.65 | - | - | - | - | 0.35 |
| P1-3 | 99.5 | - | - | - | - | 0.5 |
| C2-1 | - | 99.7 | - | 0.3 | - | - |
| C2-2 | - | 99.65 | - | - | 0.35 | - |
| P2-1 | - | 99.65 | - | - | - | 0.35 |
| P2-2 | - | 99.5 | - | - | - | 0.5 |
| P2-3 | | 99.3 | | 0.2 | | 0.5 |
| P2-4 | | 99.2 | | 0.3 | | 0.5 |
| C3-1 | - | - | 99.7 | 0.3 | - | - |
| C3-2 | - | - | 99.65 | - | 0.35 | - |
| P3-1 | - | - | 99.5 | - | - | 0.5 |
| P3-2 | - | - | 99.35 | 0.15 | - | 0.5 |
| P3-3 | - | - | 99.3 | 0.2 | - | 0.5 |
| P3-4 | - | - | 99.2 | 0.3 | - | 0.5 |

A3, Voltage Holding Ratio (VHR)

For measuring the VHR the polymerisable mixtures are filled into electrooptic test cells which consist of two plane-parallel glass substrates each having inside an ITO electrode layer and a polyimide alignment layer, wherein the two polyimide layers are rubbed antiparallel to one another and effect a homeotropic edge alignment of the LC molecules.

To clarify the impact of UV light to the different LC host mixtures, the VHR of the host mixtures without polymerizable compounds is measured at 60°C with application of a voltage of 1 V / 0.6 Hz before and after UV exposure using two different UV lamps (type-B fluorescence UV lamp with a short wavelength cut-off at 330 nm, and type-C fluorescence UV lamp with a short wavelength cut-off at 310 nm). Light stress usually causes the decrease of VHR in LC mixtures, therefore the smaller the absolute decrease of VHR value after stress, the better performance for display applications.

The results for the pure host mixtures are shown in Table 3.

Table 3 - VHR of Host Mixtures

| Mixture | N1 | | N2 | | C3 | |
|---|---|---|---|---|---|---|
| Lamp type | C | B | C | B | C | B |
| Time (h) | VHR (%) | | | | | |
| 0 | 97.8 | 97.8 | 96.3 | 97.1 | 96.6 | 96.4 |

(continued)

| Mixture | N1 | | N2 | | C3 | |
|---|---|---|---|---|---|---|
| Lamp type | C | B | C | B | C | B |
| Time (h) | VHR (%) | | | | | |
| 2 | 94.7 | 96.4 | 44.6 | 93.2 | 45.7 | 89.2 |

From Table 3 it can be seen that for LC host mixture N1 there is no significant difference of the VHR of the host mixtures after exposure by type-B and type-C lamps. However, for LC host mixtures N2 and C3 there is a clear difference of the VHR values when being irradiated either with type-B or type-C lamp. This shows that the impact of the UV-spectrum to the different LC host mixtures is significant.

The VHR values of the polymerizable mixtures based on host mixture N1, N2 or C3, respectively, are measured as described above. To ensure optimum UV absorption in consideration of the different absorption wavelengths of the polymerizable compounds, a UV type-C lamp was used for the mixtures containing polymerizable compound RM-1, and a UV type-B lamp was used for the mixtures containing polymerizable compound RM-35 or M1.

The results are shown in Tables 4, 5 and 6.

Table 4 - VHR of Polymerizable Mixtures based on Host Mixture N1

| Mixture | C1-1 | C1-2 | P1-1 | P1-2 | P1-3 |
|---|---|---|---|---|---|
| Lamp type | C | B | B | B | B |
| Time (h) | VHR (%) | | | | |
| 0 | 98.1 | 98.2 | 98.2 | 98.3 | 98.2 |
| 2 | 96.4 | 95.7 | 95.9 | 95.6 | 96.3 |

From Table 4 it can be seen that all polymerizable mixtures show good VHR values after UV exposure.

Table 5 - VHR of Polymerizable Mixtures based on Host Mixture N2

| Mixture | C2-1 | C2-2 | P2-1 | P2-2 | P2-3 | P2-4 |
|---|---|---|---|---|---|---|
| Lamp type | C | B | B | B | B | B |
| Time (h) | VHR (%) | | | | | |
| 0 | 98.0 | 97.7 | 97.7 | 97.7 | 96.5 | 96.5 |
| 2 | 55.3 | 67.6 | 82.0 | 85.3 | 90.8 | 90.3 |

From Table 4 it can be seen that the polymerizable mixtures P2-1, P2-2, P2-3 and P2-4 according to the present invention show significantly higher VHR after UV exposure than the reference mixtures C2-1 and C2-2.

Table 6 - VHR of Polymerizable Mixtures based on Host Mixture C3

| Mixture | C3-1 | C3-2 | P3-1 | P3-2 | P3-3 | P3-4 |
|---|---|---|---|---|---|---|
| Lamp type | C | B | B | B | B | B |
| Time (h) | VHR (%) | | | | | |
| 0 | 95.6 | 96.2 | 95.8 | 96.2 | 93.3 | 95.9 |
| 2 | 49.8 | 82.2 | 89.6 | 90.4 | 90.3 | 91.0 |

From Table 6 it can be seen that the polymerizable mixtures P31, P32, P3-3 and P3-4 according to the present invention show significantly higher VHR after UV exposure than the reference mixtures C3-1 and C3-2. It can also be seen that the polymerizable mixtures P3-2, P3-3 and P3-4 containing polymerizable compound M1 together with polymerizable compound RM-1 show a further increase of the VHR after UV exposure.

Tilt Angle Stability

The polymerizable mixtures are filled into PSVA test cells with a gap of approximately 3.3 μm and then exposed to UV light using a C-type lamp for UV1 step and C-type or B-type Lamp for UV2 step. During the UV1 step, a voltage is simultaneously applied to the electrodes of the test cell (20 V, DC). In the UV2 step no voltage is applied. The other conditions are as follows:

UV1 intensity: 4.3 mW/cm$^2$ at room temperature, the duration of the irradiation adjusted to reach a tilt angle of 2°.

UV2 intensity: 1.7 mW/cm$^2$ at room temperature for 120 minuntes

The change of tilt angle is measured in the test cells using the RET system from Otsuka Electronics after UV polymerization and again after electrical stress with a square wave of 60 $V_{Peak\text{-}Peak}$ at 60 Hz for 72 hours with illumination by a display backl light followed by a relaxation time of 10-20 minutes.

Tilt stability, i.e. the change of the tilt angle after a period of electric field stress, is a measure of image sticking. A low value of the change of the tilt angle indicates a high tilt stability and a low level of image sticking.

The change of the tilt angle *Δtilt* is determined according to equation (1)

$$tilt_{\text{after stress}} - tilt_{\text{after tilt generation}} = \Delta tilt \qquad (1)$$

and is shown in Table 7 below.

The lower the value of *Δtilt*, the higher is the tilt stability.

Table 7 - Tilt Stability

| Mixture | *Δtilt* / ° |
|---|---|
| P1-2 | 0.37 |
| P1-3 | 0.26 |
| P2-3 | 0.34 |
| P2-4 | 0.25 |
| P3-3 | 0.24 |

From Table 7 it can be seen that the polymerizable mixtures according to the present invention show good tilt stability.

## Claims

1. An LC medium, **characterized in that** it comprises one or more polymerizable compounds of formula I

$$P\text{-}Sp\text{-}A^a\text{-}(Z^a\text{-}A^b)_z\text{-}R^b \qquad I$$

wherein the individual radicals, independently of each other and on each occurrence identically or differently, have the following meanings

$R^b$ P-Sp- or R,

R F, Cl, -CN or straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O-, $CR^0$=$CR^{00}$-, -C≡C-,

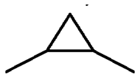, 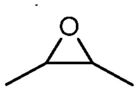. 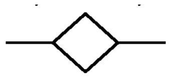, 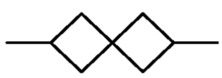,

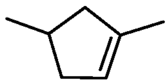, or 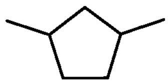,

in such a manner that O- and/or S-atoms are not directly connected with each other, and wherein one or more H atoms are each optionally replaced by F or Cl or P-Sp-,

P a polymerizable group,

Sp a spacer group which is optionally substituted by P, or a single bond,

$A^a$, $A^b$ an alicyclic, heterocyclic, aromatic or heteroaromatic group with 4 to 20 ring atoms, which is monocyclic or polycyclic and which is optionally substituted by one or more groups A, L or P-Sp-,

$Z^a$ -O-, -S-, -CO-, -CO-O-, -O-CO-, -O-CO-O-, $-OCH_2-$, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -CH=CF-, -CF=CH-, -C≡C-, -CH=CH-CO-O-, -O-CO-CH=CH-, $-CH_2-CH_2-CO-O-$, $-O-CO-CH_2-CH_2-$, $-CR^0R^{00}-$, or a single bond,

$R^0$, $R^{00}$ H or alkyl having 1 to 12 C atoms,

A alkyl with 2 to 12, preferably 2 to 8, C-atoms, wherein one or more, preferably non-terminal, $CH_2$ groups are replaced by S, such that S atoms are not directly connected with each other,

L F, Cl, -CN, P-Sp- or straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O-, $CR^0=CR^{00}-$, -C≡C-,

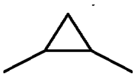, 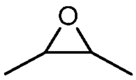, 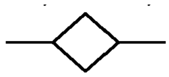, 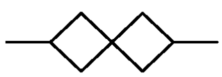,

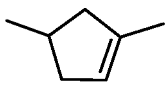, or 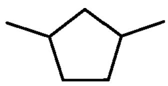,

in such a manner that O- and/or S-atoms are not directly connected with each other, and wherein one or more H atoms are each optionally replaced by P-Sp-, F or C!,

z 0, 1, 2, 3 or 4,

n1 1,2, 3 or 4,

wherein the compounds of formula I contain at least one group $A^a$ or $A^b$ that is substituted by at least one group A, and further comprises one or more compounds of formula II

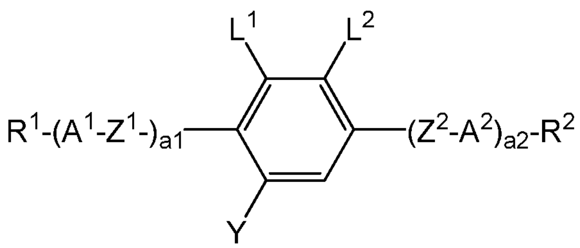

II

wherein the individual radicals, independently of each other and on each occurrence identically or differently, have the following meanings

$R^1$, $R^2$ straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O-, $CR^0=CR^{00}-$, -C≡C-,

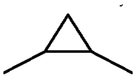, 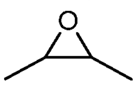, 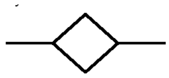, 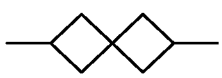,

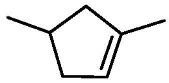, or 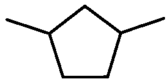,

in such a manner that O- and/or S-atoms are not directly connected with each other, and wherein one or more H atoms are each optionally replaced by F or Cl,

$A^1$, $A^2$ a group selected from the following formulae

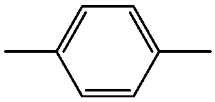
A1

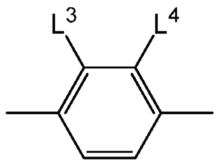
A2

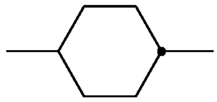
A3

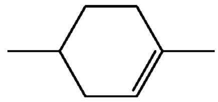
A4

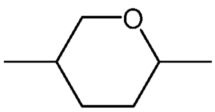
A5

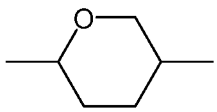
A6

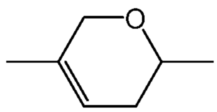
A7

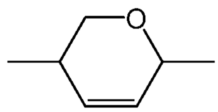
A8

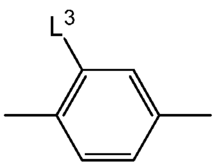
A9

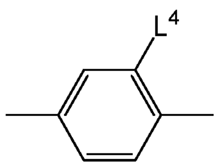
A10

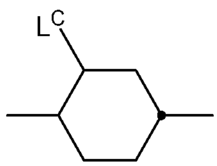
A11

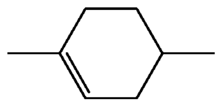
A12

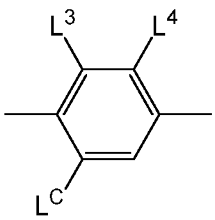
A13

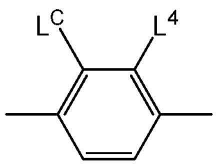
A14

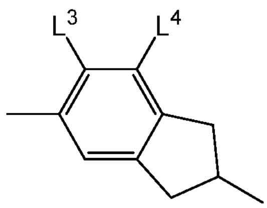
A15

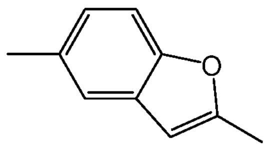
A16

wherein the individual radicals, independently of each other and on each occurrence identically or differently, have the following meanings

$Z^1$, $Z^2$ $-CH_2CH_2-$, -CH=CH-, $-CF_2O-$, $-OCF_2-$, $-CH_2O-$, $-OCH_2-$,-CO-O-, -O-CO-, $-C_2F_4-$, -CF=CF-, -CH=CH-$CH_2O$- or a single bond,

$L^1$, $L^2$, $L^3$, $L^4$ F, Cl, $OCF_3$, $CF_3$, $CH_3$, $CH_2F$ or $CHF_2$,

Y H, F, Cl, $CF_3$, $CHF_2$ or $CH_3$,

$L^C$ $CH_3$ or $OCH_3$,

a1 1 or 2,

a2 0 or 1.

**2.** The LC medium according to Claim 1, **characterized in that** the group A in formula I denotes thioalkyl with 1 to 7 C atoms.

**3.** The LC medium according to Claim 1 or 2, **characterized in that** the group A in formula I denotes $SCH_3$.

**4.** The compound according to any one of Claims 1 to 3, characterized n that the compounds of formula I are selected from the following subformulae:

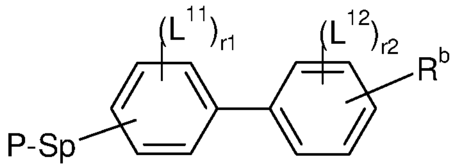

I1

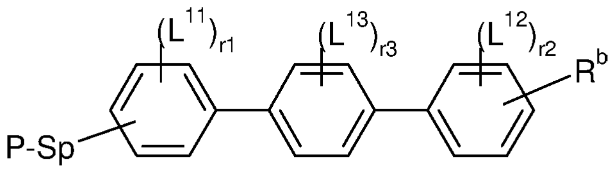

I2

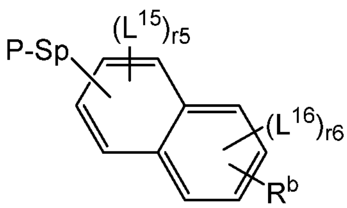

I3

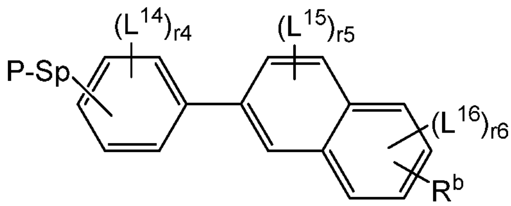

I4a

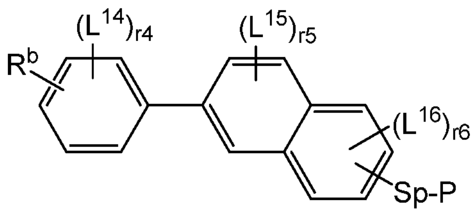

I4b

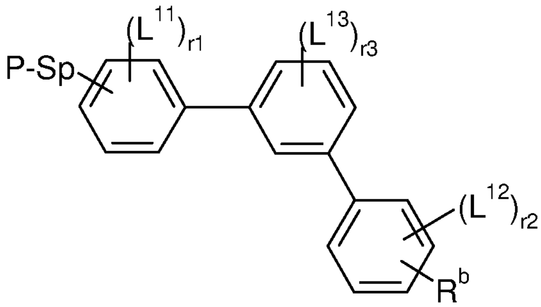

I5

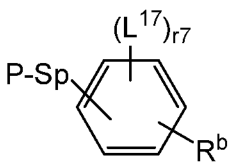

I6

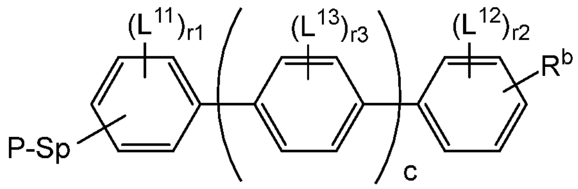

I12

wherein the individual radicals, independently of each other, and on each occurrence identically or differently, have the following meanings

A, P, Sp, $R^b$ one of the meanings given in claim 1, 2 or 3,
$L^{11}$ to $L^{17}$ L or A,
r1, r2, r3, r4 0, 1, 2, 3 or 4, wherein in formula I1, I2 and I5 r1+r2+r3 ≥1, and in formula I12 r1+r2+r3 ≥,
r5, r6, 0, 1, 2 or 3, wherein in formula I3 r5+r6 ≥1 and in formula I4a and I4b r4+r5+r6 ≥1 ,
r7 1, 2, 3 or 4,
c 0, 1 or 2,

wherein the compounds contain at least group $L^{11}$ to $L^{17}$ that is A.

**5.** The LC medium according to any one of Claims 1 to 4, **characterized in that** the compounds of formula I are selected from the following subformulae:

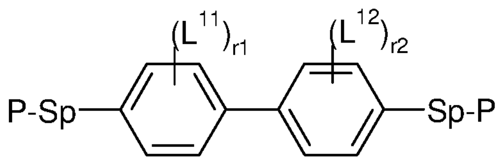

I1A

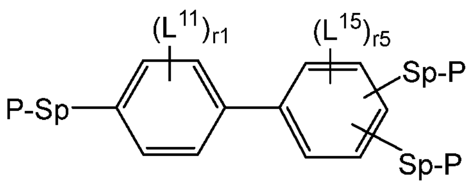

I1B

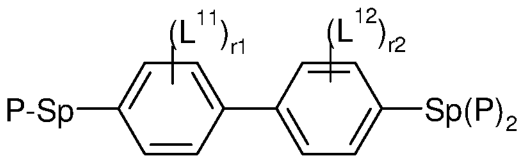

I1C

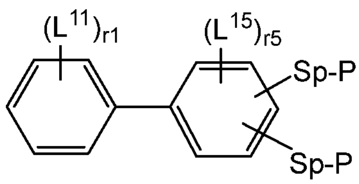

I1D

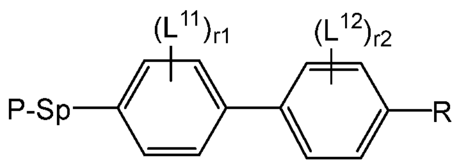

I1E

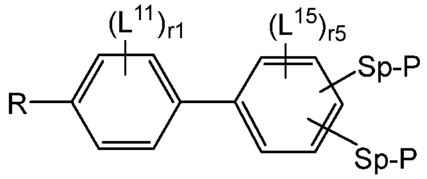

I1F

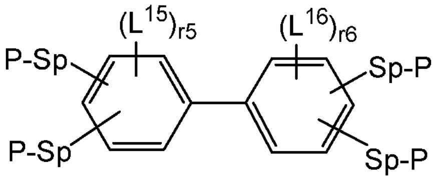

I1G

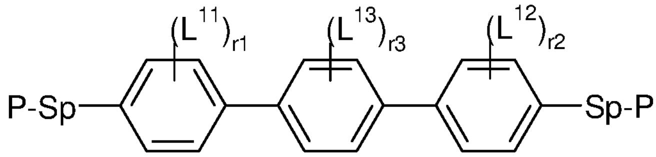

I2A

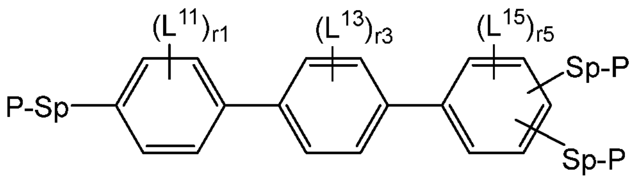

I2B

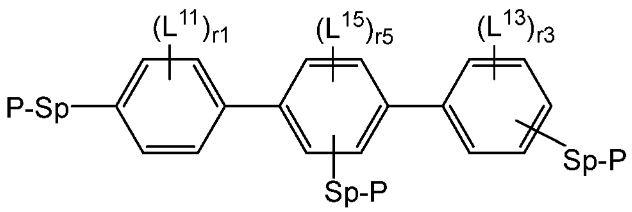

I2C

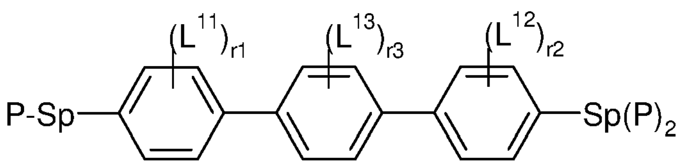

I2D

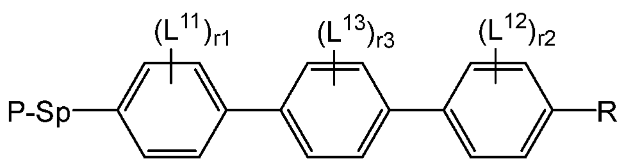

I2E

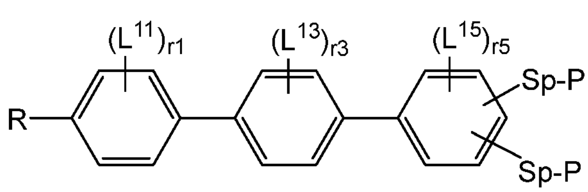

I2F

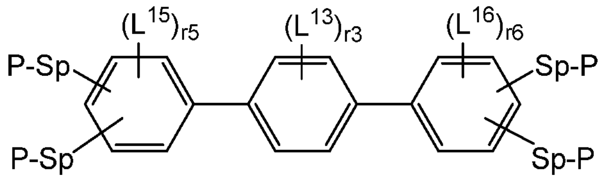

I2G

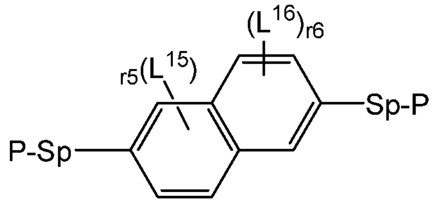

I3A

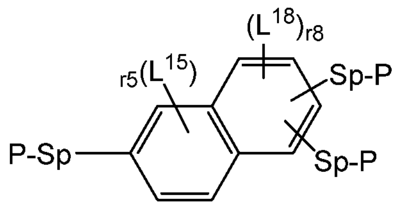

I3B

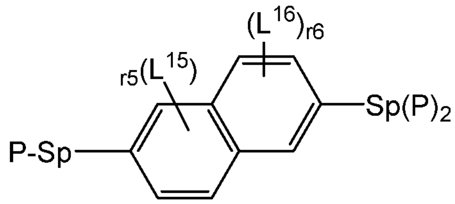

I3C

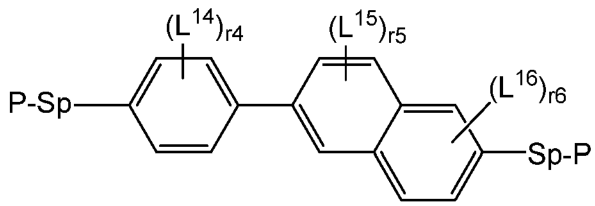

I4A

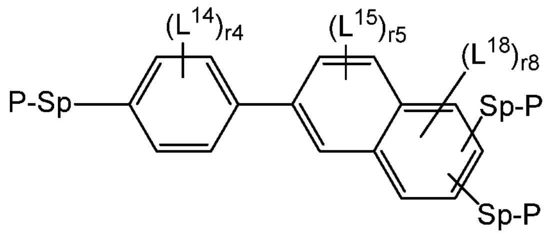

I4B

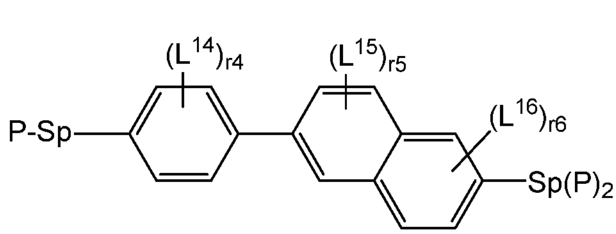

I4C

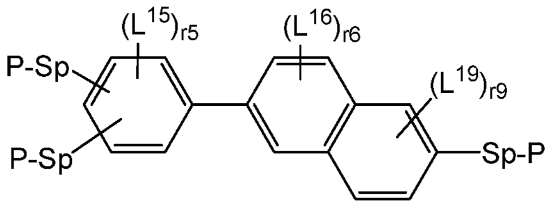

I4D

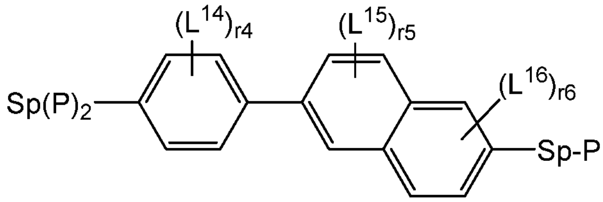

I4E

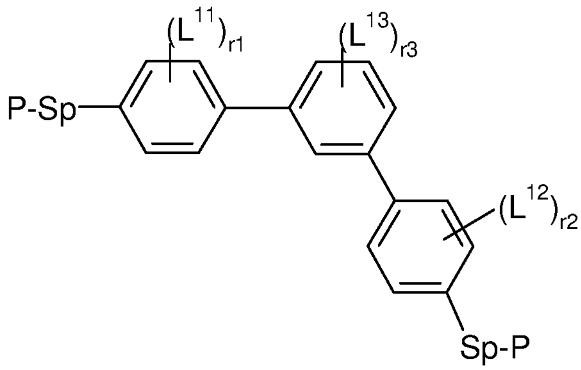

I5A

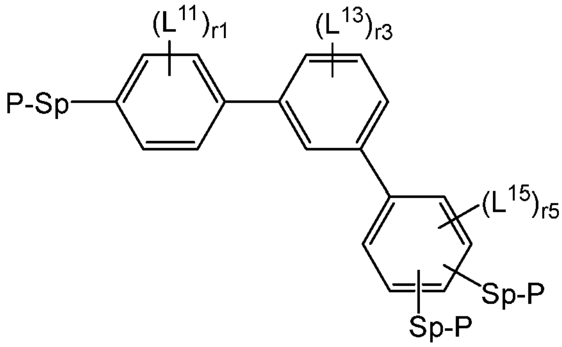

I5B

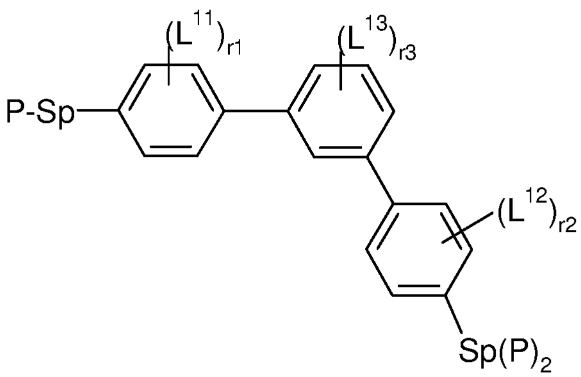

I5C

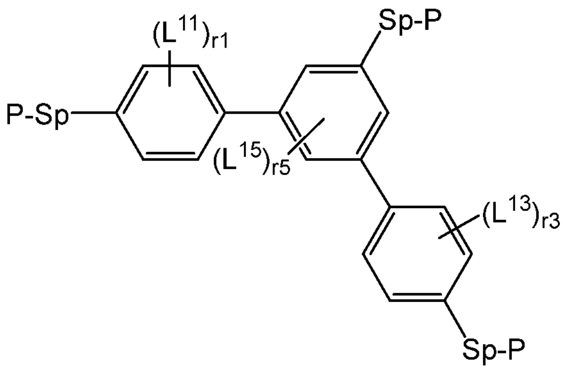

I5D

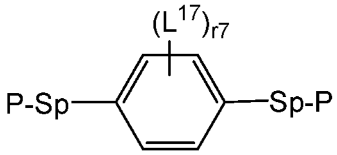

I6A

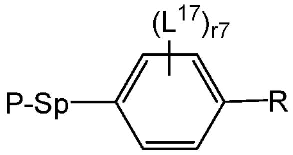

I6B

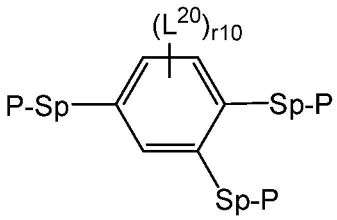

I6C

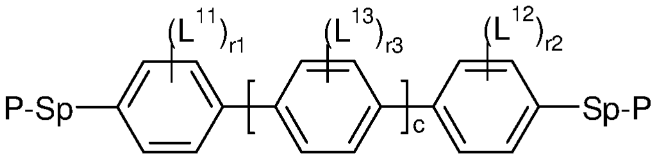

I12A

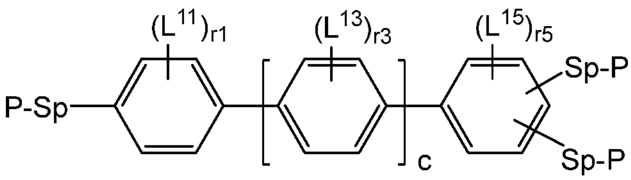

I12B

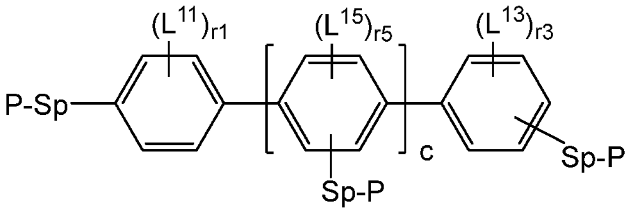

I12C

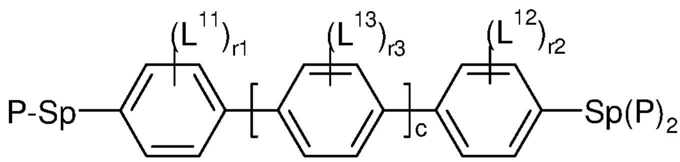

I12D

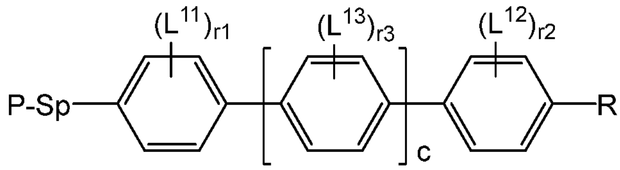

I12E

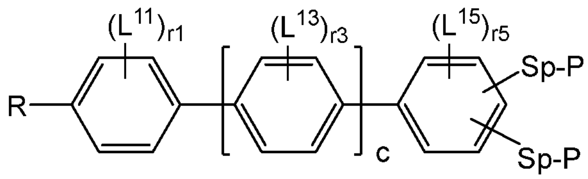

I12F

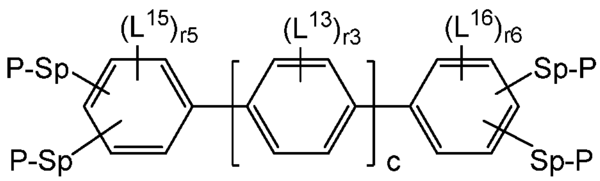

I12G

wherein

R, P, Sp, $L^{11-17}$ and r1-r7 have the meanings given in any one of claims 1 to 5,
$L^{18}$, $L^{19}$ and $L^{20}$ have one of the meanings given for $L^{11}$,
r8 is 0, 1 or 2,
r9 is 0, 1, 2 or 3,
r10 is 1, 2 or 3,
c is 0, 1 or 2,
$Sp(P)_2$ denotes a spacer group Sp that is substituted by two polymerizable groups P at identical or different positions,
and wherein
in formulae I1A, I1C and I1E r1+r2 ≥1,
in formula I1B, I1D and I1F r1+r5 ≥1,
in formula I1G, I3A and I3C r5+r6 ≥1,
in formulae I2A, I2D, I2E, I5A and I5C r1+r2+r3 ≥1,
in formulae I2B, I2C, I2F, I5B and I5D r1+r3+r5 ≥1,
in formula I2G r3+r5+r6 ≥1,
in formula I4A, I4C and I4E r4+r5+r6 ≥1,
in formula I4D r5+r6+r9 ≥1,
in formula I3B r5+r8 ≥1,
in formula I4B r4+r5+r8 ≥1,
in formulae I12A, I12D and I12E r1+r2+r3 ≥1,
in formulae I12B, I12C and I12F r1+r3+r5 ≥1,
in formula I12G r3+r5+r6 ≥1,
and wherein the compounds contain at least group $L^{11}$ to $L^{20}$ that denotes A.

6. The LC medium according to any one of Claims 1 to 5, **characterized in that** the compounds of formula I are selected from the following subformulae:

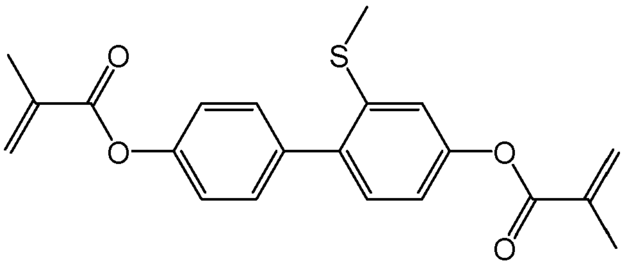

I1A-1-1a

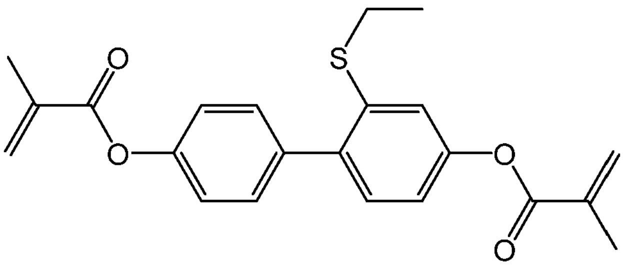

I1A-1-1b

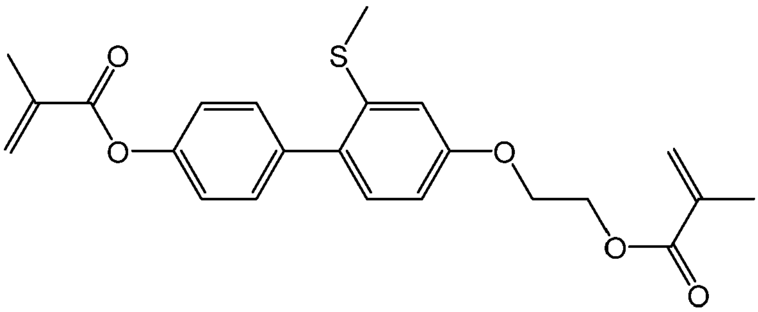

I1A-1-1c

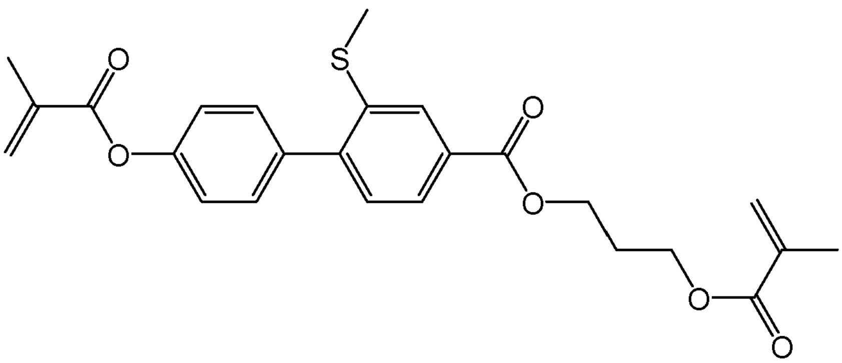

I1A-1-1d

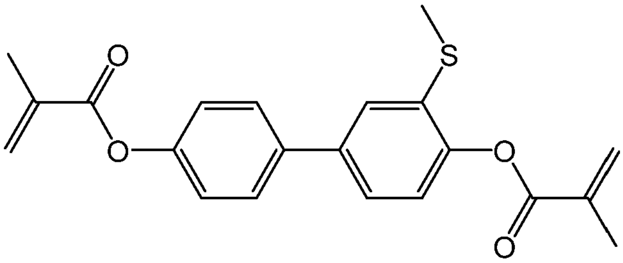

I1A-1-2a

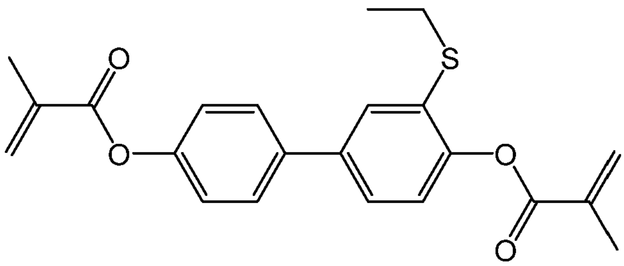

I1A-1-2b

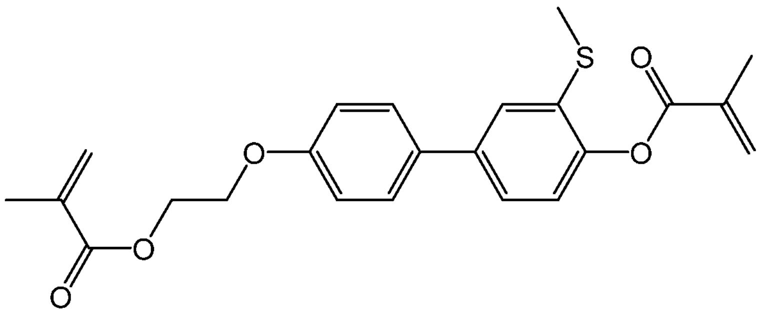

I1A-1-2c

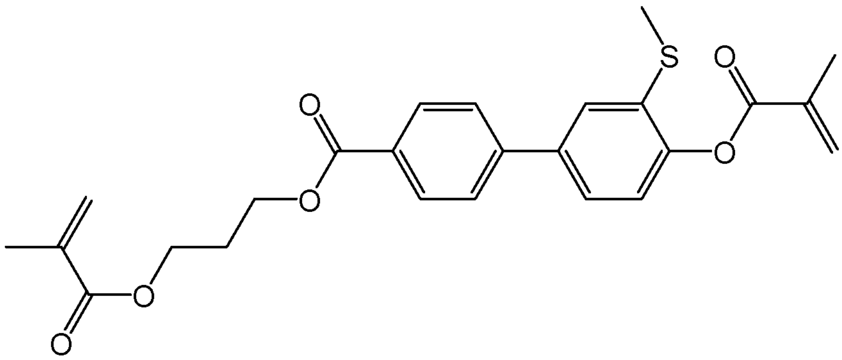

I1A-1-2d

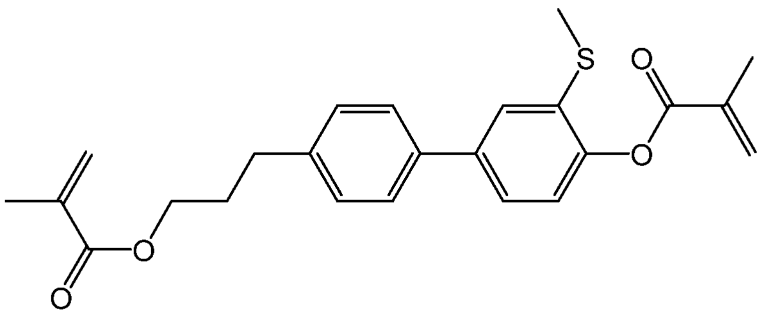

I1A-1-2e

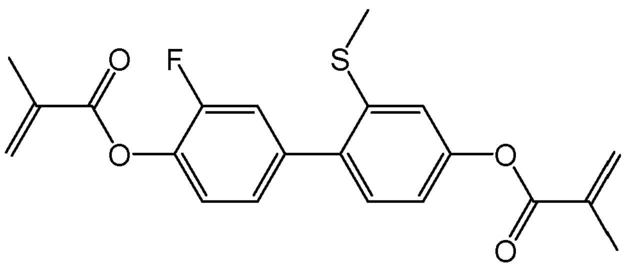

I1A-2-1a

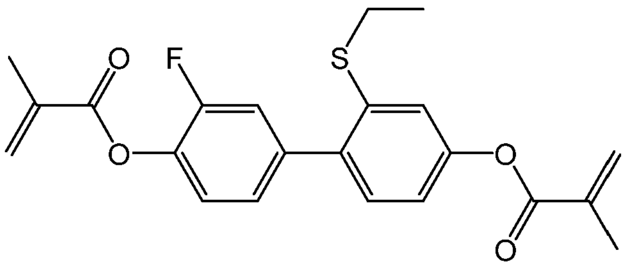

I1A-2-1b

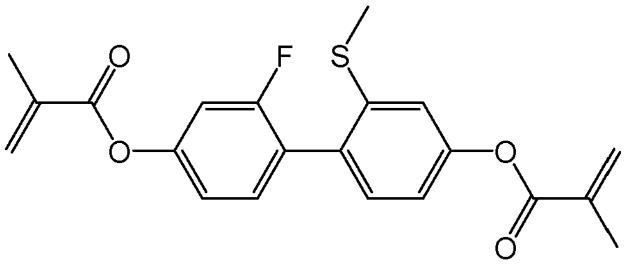

I1A-2-2a

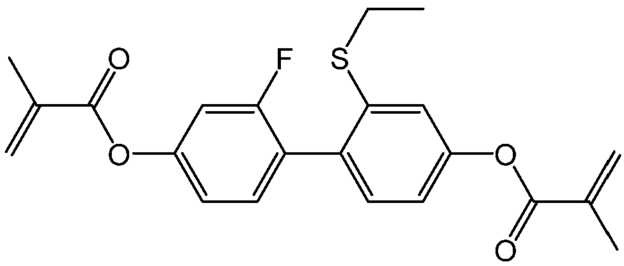

I1A-2-2b

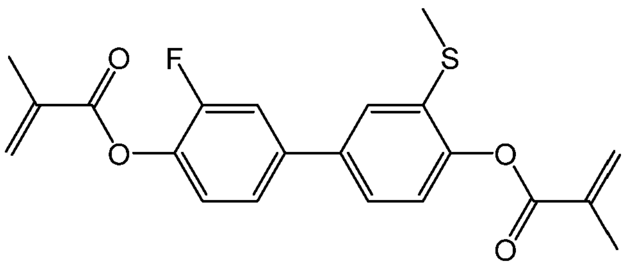

I1A-2-3a

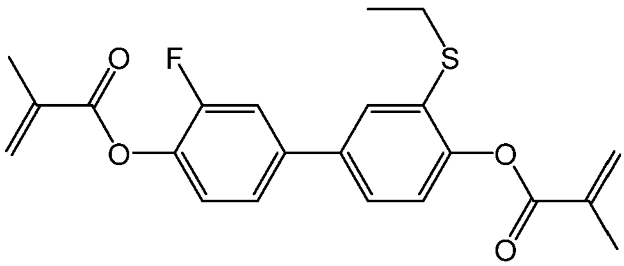

I1A-2-3b

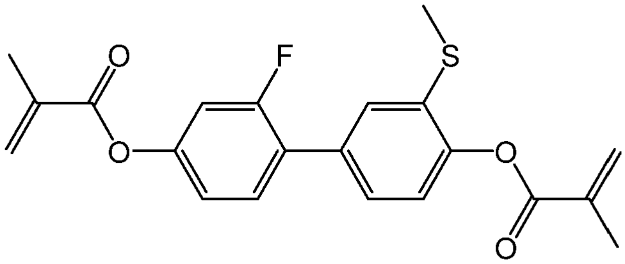

I1A-2-4a

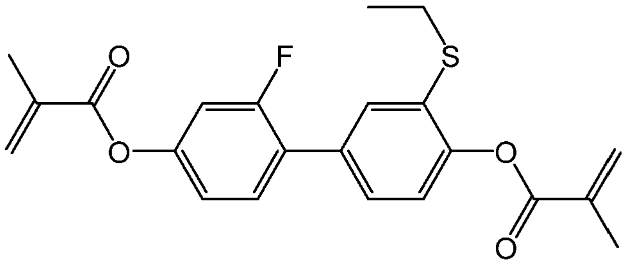

I1A-2-4b

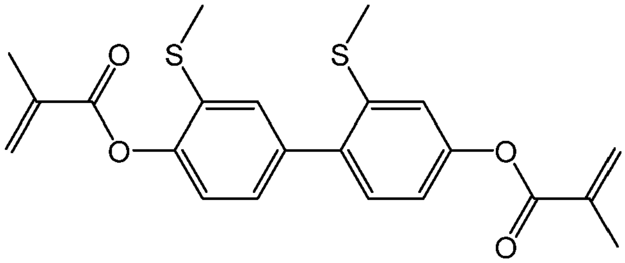

I1A-4-1a

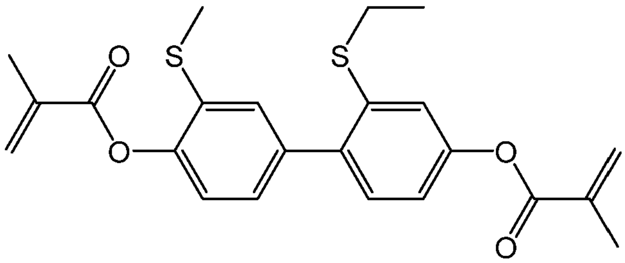

I1A-4-1b

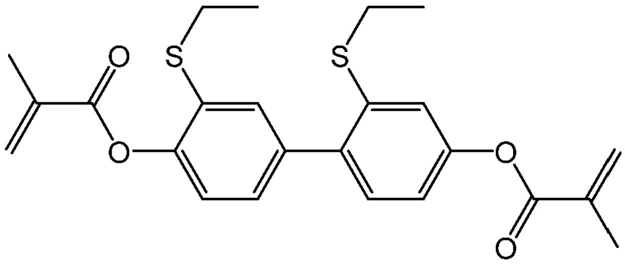

I1A-4-1c

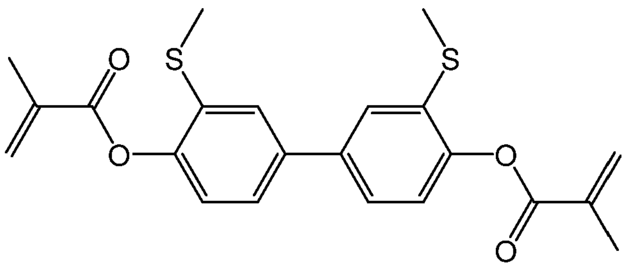

I1A-4-2a

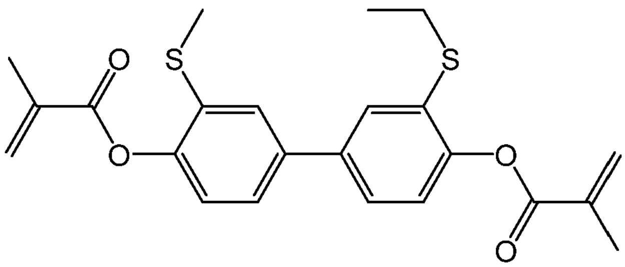

I1A-4-2b

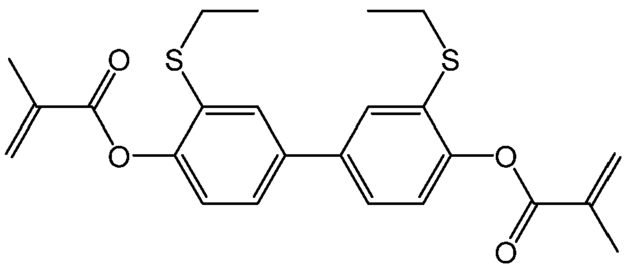

I1A-4-2c

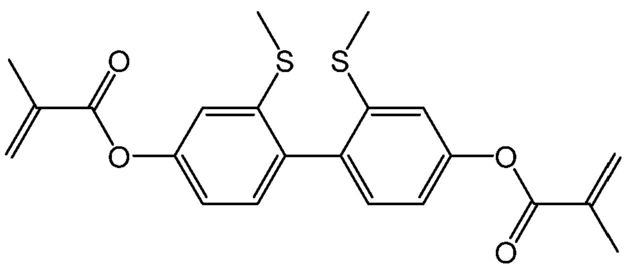

I1A-4-3a

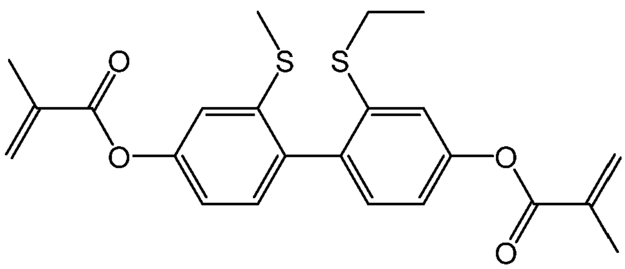

I1A-4-3b

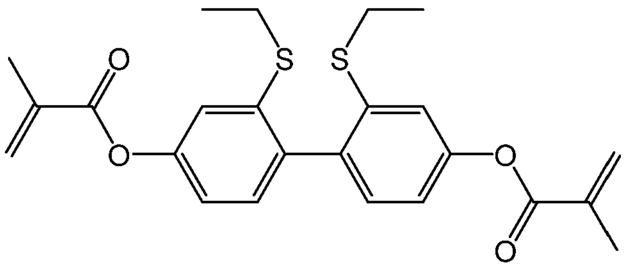

I1A-4-3c

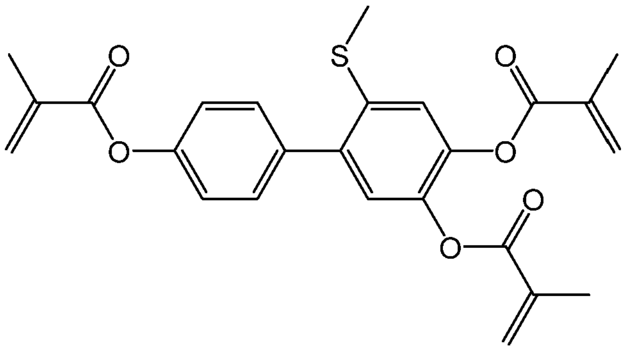

I1B-1-1a

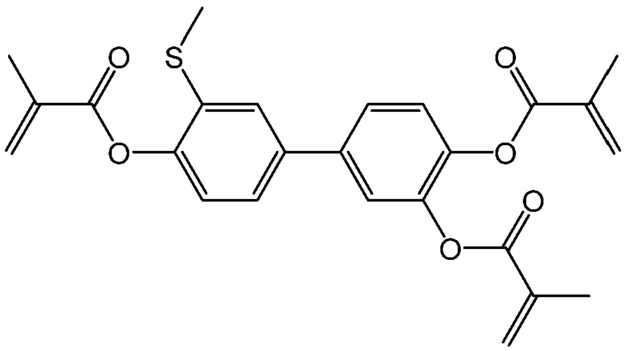

I1B-2-1a

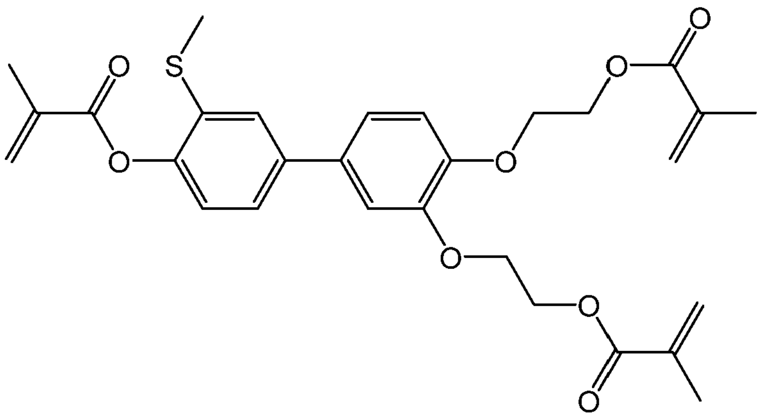

I1B-2-1b

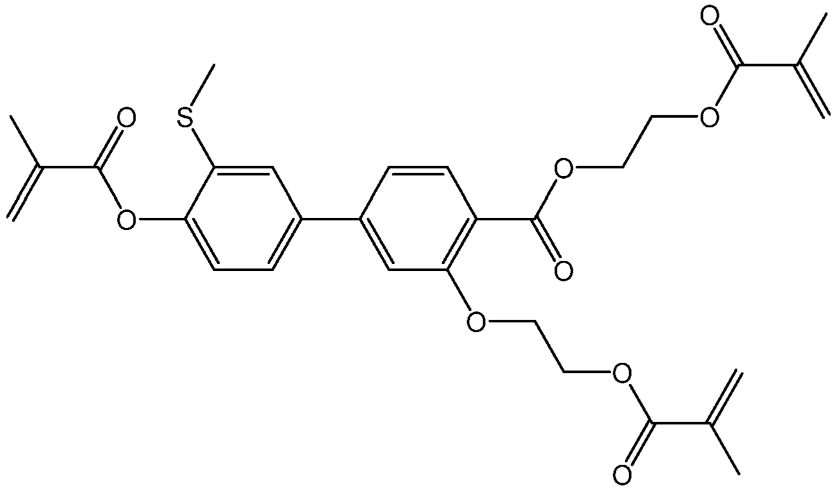

I1B-2-1c

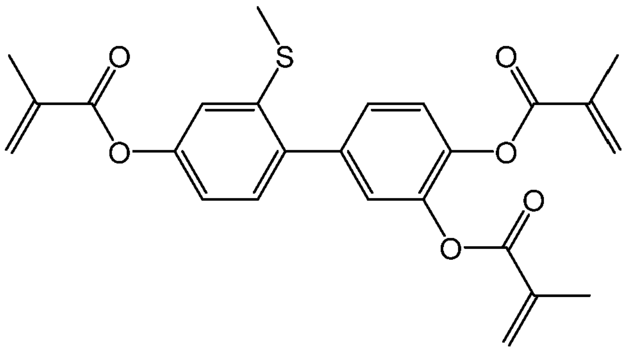

I1B-2-2a

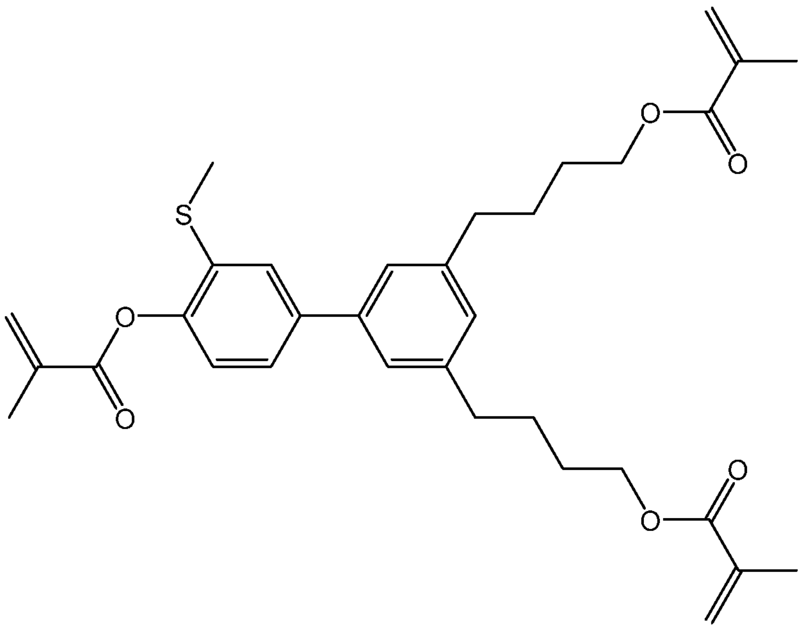

I1B-2-3a

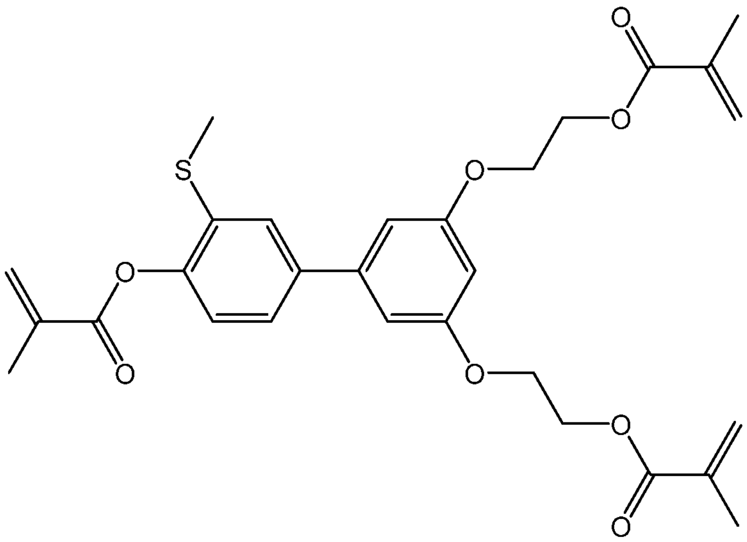

I1B-2-3b

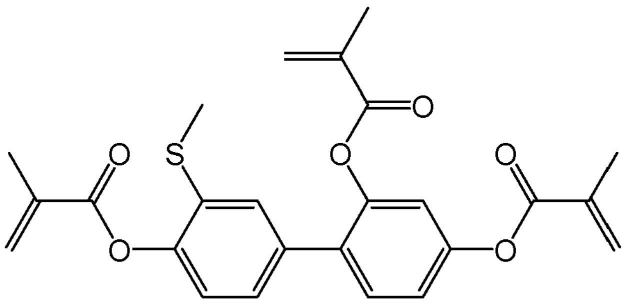

I1B-2-5a

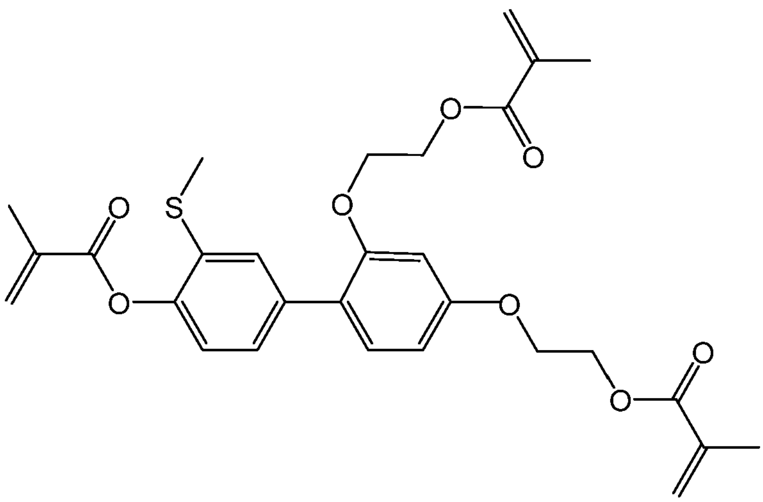

I1B-2-5b

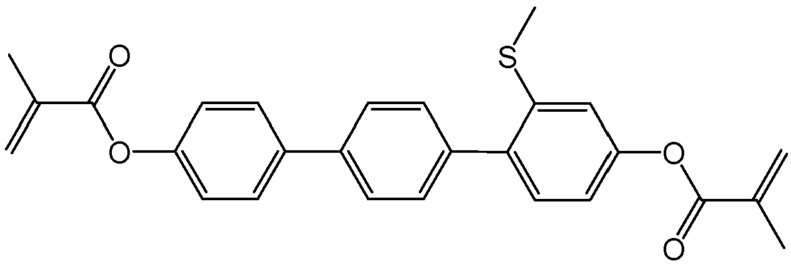

I2A-1-1a

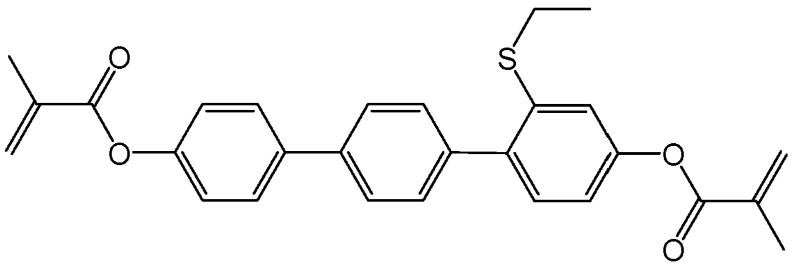

I2A-1-1b

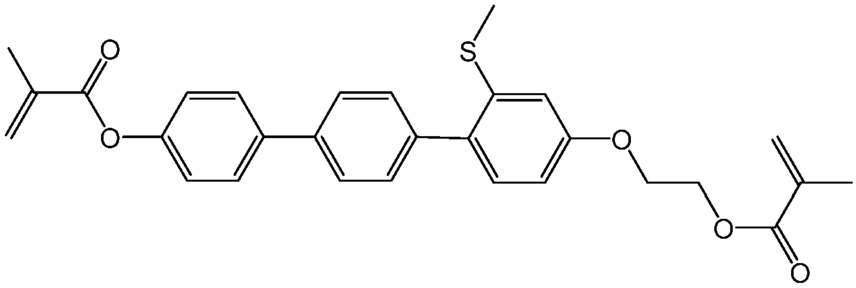

I2A-1-1c

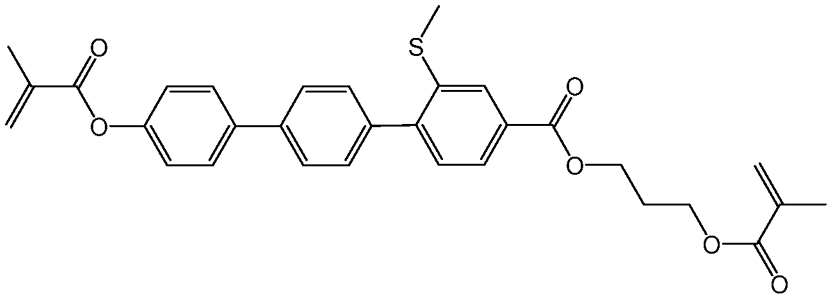

I2A-1-1d

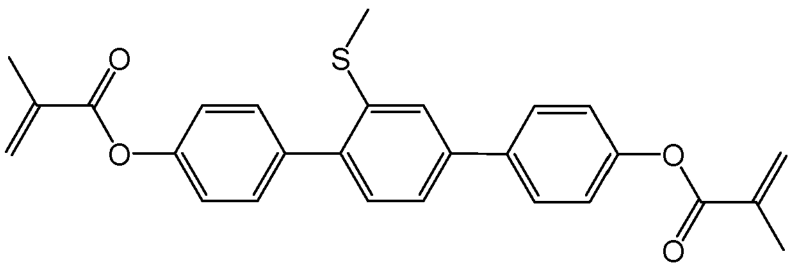

I2A-2-1a

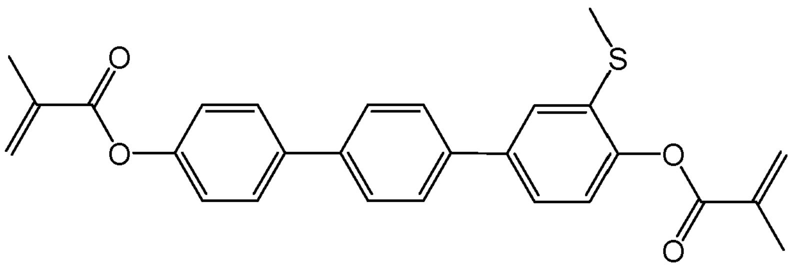

I2A-2-2a

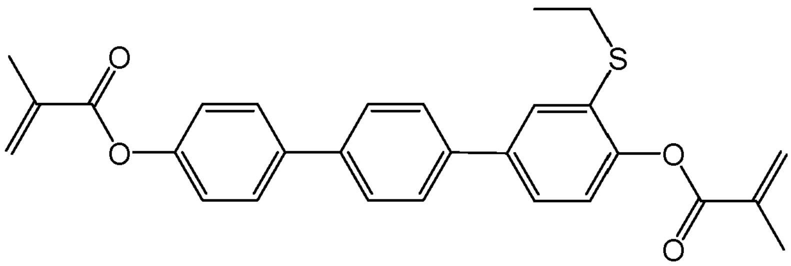

I2A-2-2b

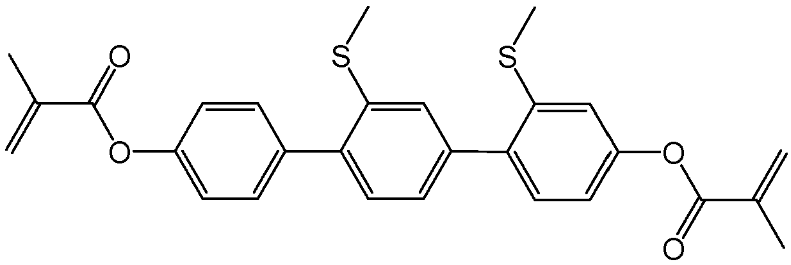

I2A-3-1a

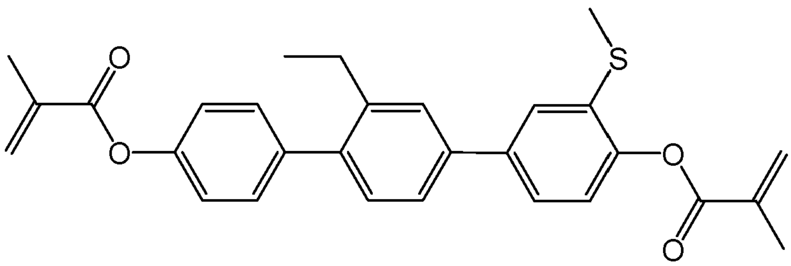

I2A-3-3a

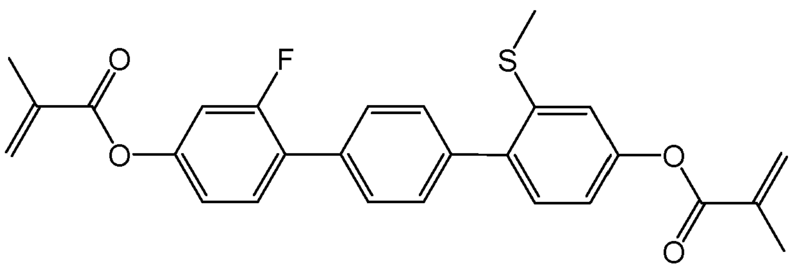

I2A-5-3a

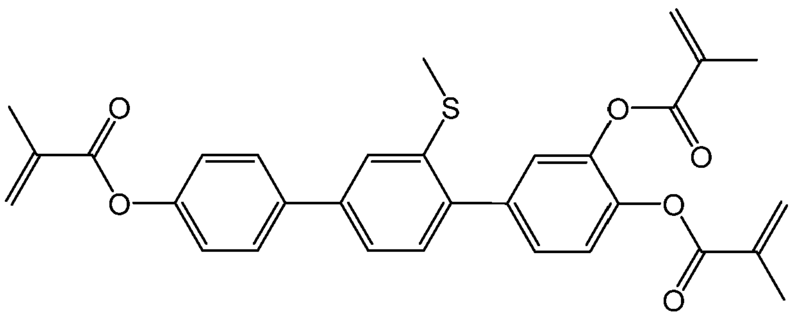

I2B-1-1a

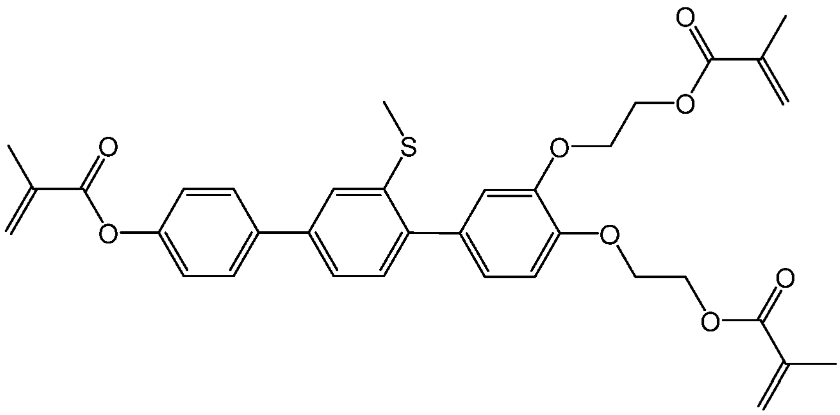

I2B-1-1b

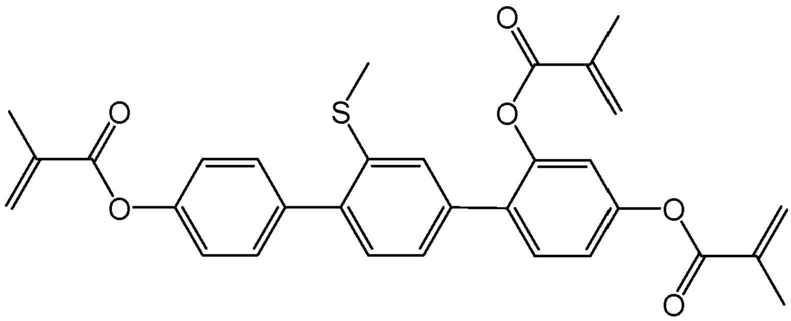

I2B-1-6a

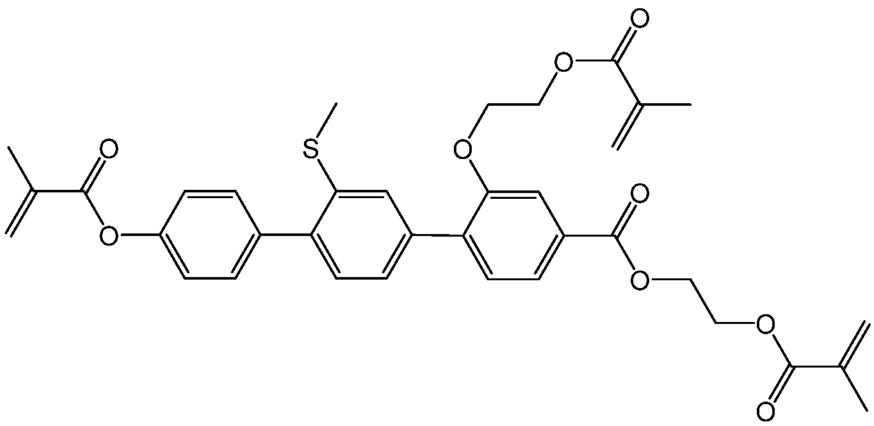

I2B-1-6b

7. The LC medium according to one or more of Claims 1 to 6, **characterized in that** it comprises one or more additional polymerizable compounds selected from the following formulae:

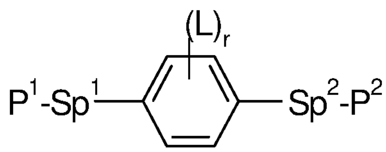

M1

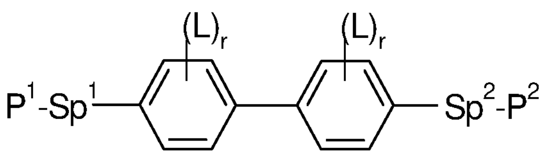

M2

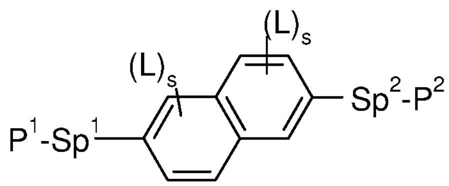

M3

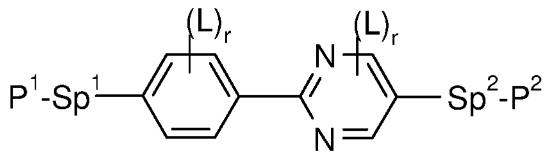

M4

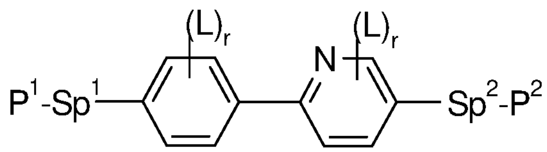

M5

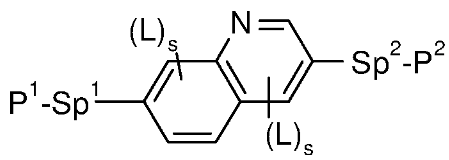

M6

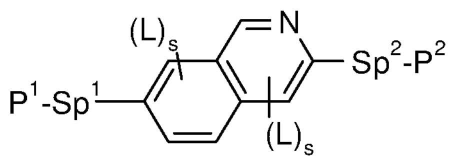

M7

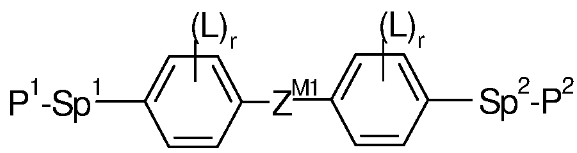

M8

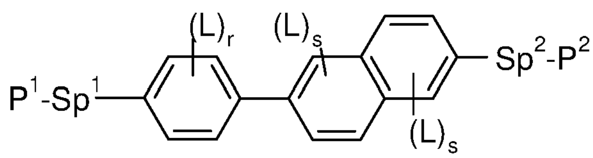

M9

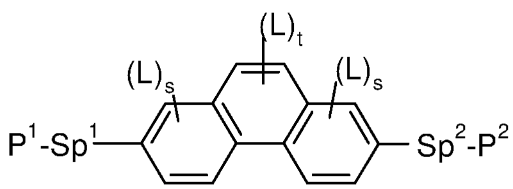

M10

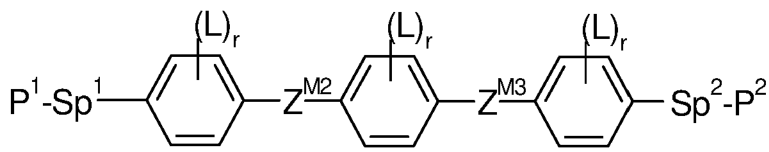

M11

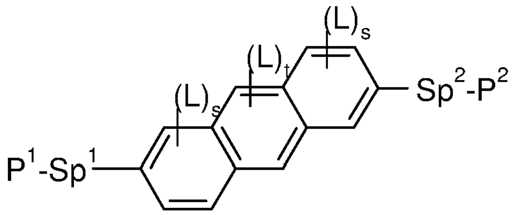

M12

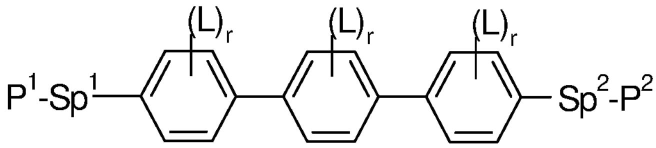

M13

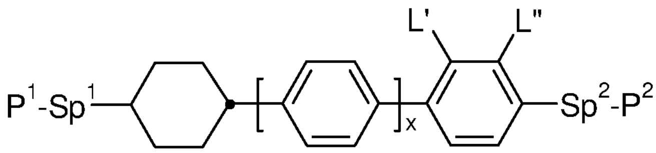

M14

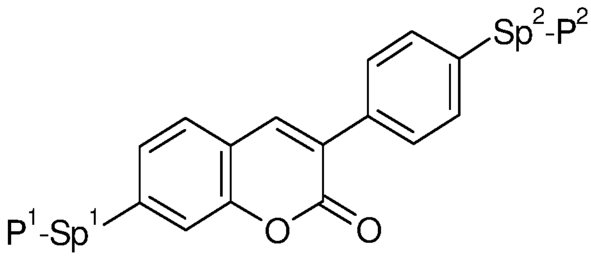

M15

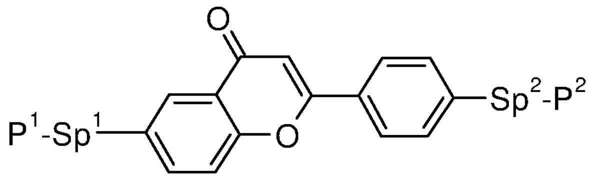

M16

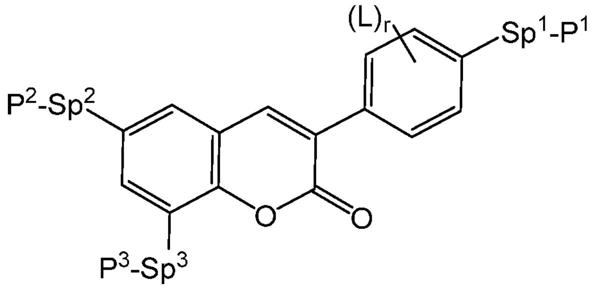

M17

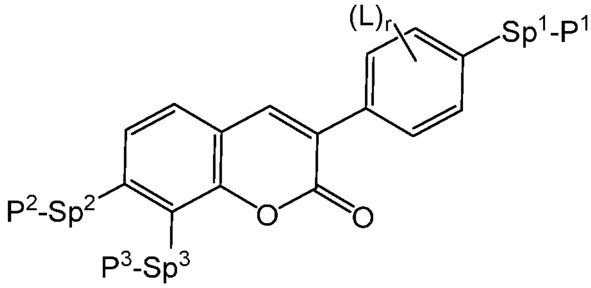

M18

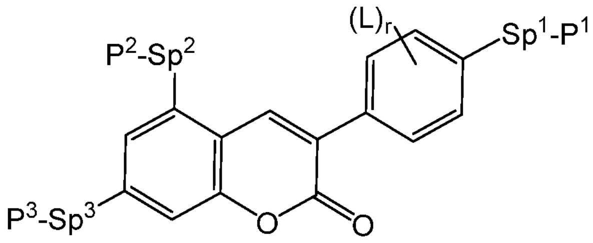

M19

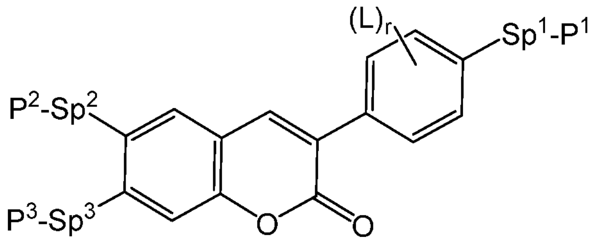

M20

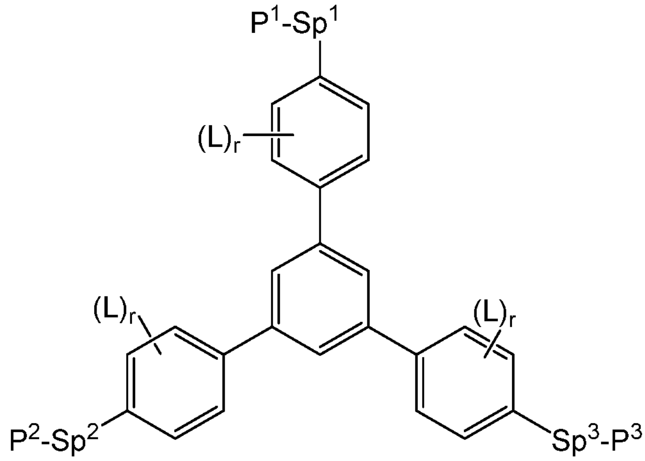

M21

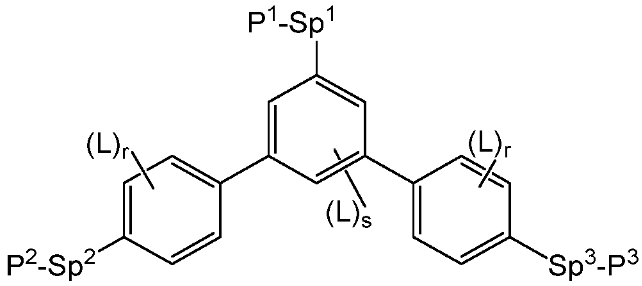

M22

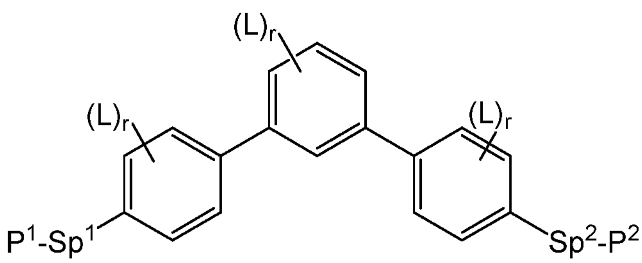

M23

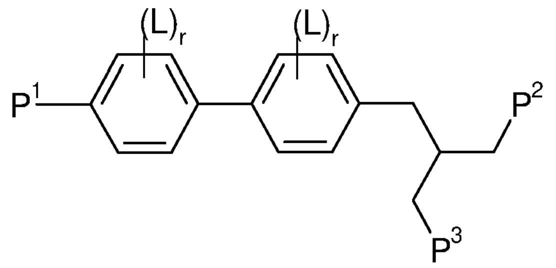

M24

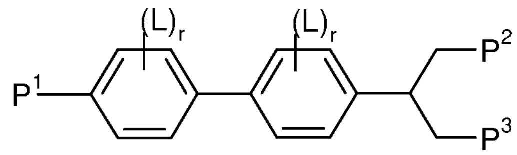

M25

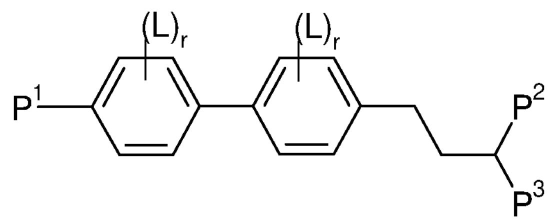

M26

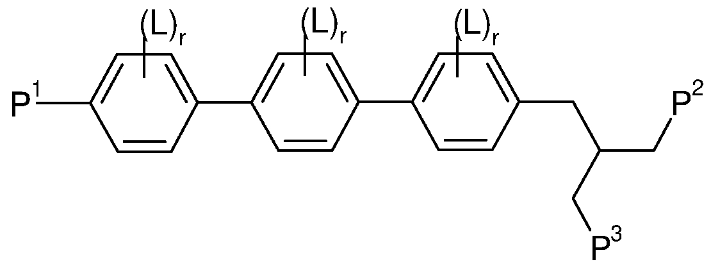

M27

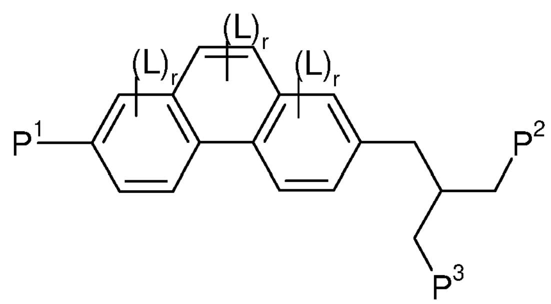

M28

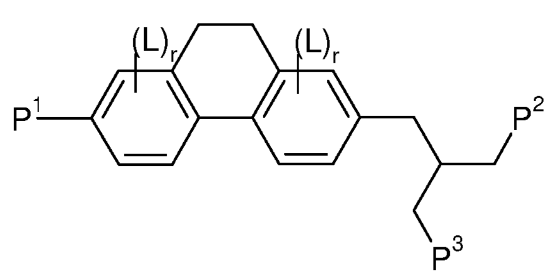

M29

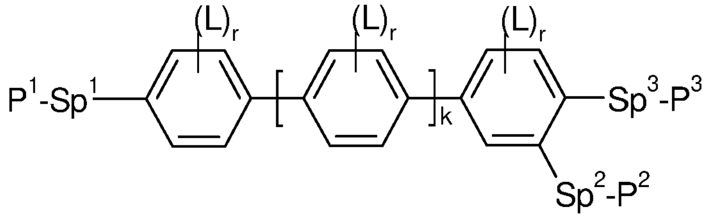

M30

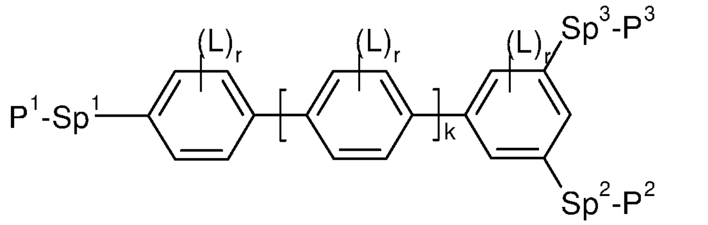

M31

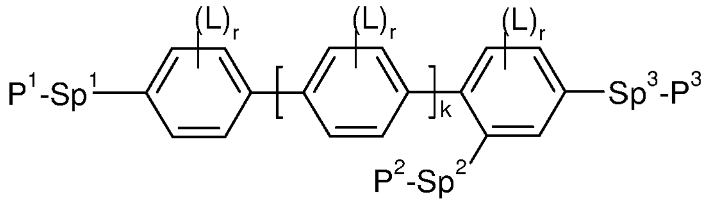

M32

in which the individual radicals, on each occurrence identically or differently, and each, independently of one another, have the following meaning:

$P^1$, $P^2$, $P^3$ a polymerizable group, preferably selected from vinyloxy, acrylate, methacrylate, fluoroacrylate, chloro-acrylate, oxetane and epoxy,
$Sp^1$, $Sp^2$, $Sp^3$ a single bond or a spacer group where, in addition, one or more of the radicals $P^1$-$Sp^1$-, $P^1$-$Sp^2$-and $P^3$-$Sp^3$- may denote $R^{aa}$, with the proviso that at least one of the radicals $P^1$-$Sp^1$-, $P^2$-$Sp^2$ and $P^3$-$Sp^3$-present is different from $R^{aa}$, preferably $-(CH_2)_{p1}$-,$-(CH_2)_{p1}$-O-, $-(CH_2)_{p1}$-CO-O- or $-(CH_2)_{p1}$-O-CO-O-, wherein p1 is an integer from 1 to 12,
$R^{aa}$ H, F, Cl, CN or straight-chain or branched alkyl having 1 to 25 C atoms, in which, in addition, one or more non-adjacent $CH_2$ groups may each be replaced, independently of one another, by $-C(R^0)=C(R^{00})$-, -C≡C-,-N(R°)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or $P^1$-$Sp^1$-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms), and wherein $R^{aa}$ does not denote or contain a group $P^1$, $P^2$ or $P^3$,
R°, $R^{00}$ H or alkyl having 1 to 12 C atoms,
$R^y$ and $R^z$ H, F, $CH_3$ or $CF_3$,
$X^1$, $X^2$, $X^3$ -CO-O-, -O-CO- or a single bond,
$Z^{M1}$ -O-, -CO-, $-C(R^yR^z)$- or $-CF_2CF_2$-,
$Z^{M2}$, $Z^{M3}$ -CO-O-, -O-CO-, $-CH_2O$-, $-OCH_2$-, $-CF_2O$-, $-OCF_2$- or $-(CH_2)_n$-, where n is 2, 3 or 4,
L F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms,
L', L" H, F or Cl,
k 0 or 1,
r 0, 1, 2, 3 or 4,
s 0, 1, 2 or 3,
t 0, 1 or 2,
x 0 or 1.

**8.** The LC medium according to one or more of Claims 1 to 7, **characterized in that** it comprises one or more additional polymerizable compounds selected from the formulae CM and MT

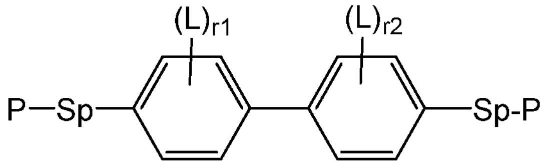

CM

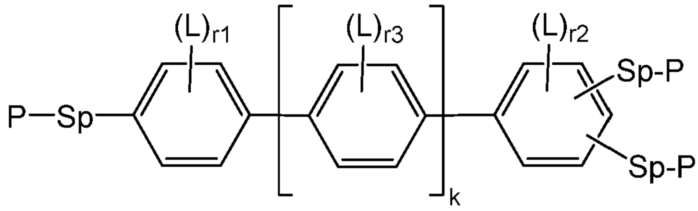

MT

in which the individual radicals, on each occurrence identically or differently, and each, independently of one another, have the following meaning:

P, Sp one of the meanings given in claim 1,
L F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms,
k 0 or 1,
r1, r2, r3 0, 1, 2, 3 or 4, preferably 0, 1 or 2, very preferably 0 or 1.

**9.** The LC medium according to Claim 8, **characterized in that** it the additional polymerizable compounds are selected from the following subformulae

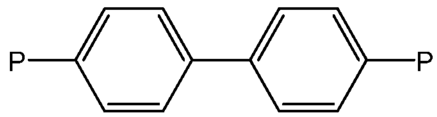

CM-1-1

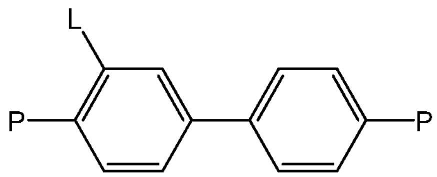

CM-1-2

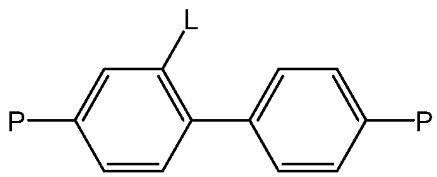

CM-1-3

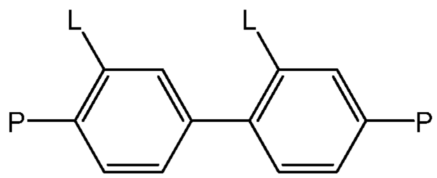

CM-1-4

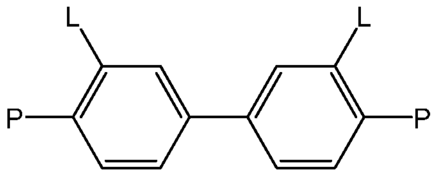

CM-1-5

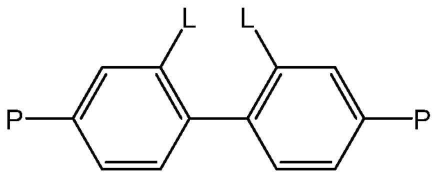

CM-1-6

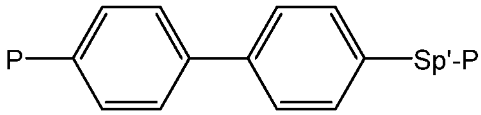

CM-2-1

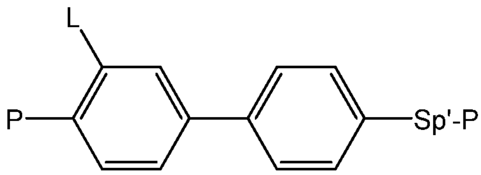

CM-2-2

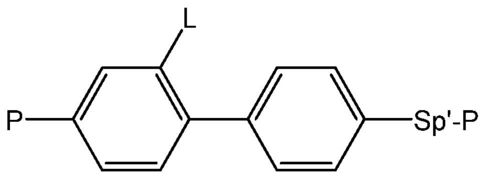

CM-2-3

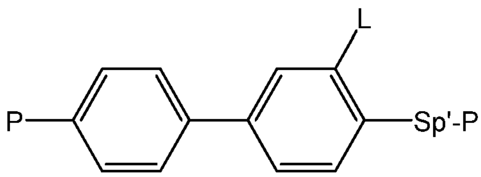

CM-2-4

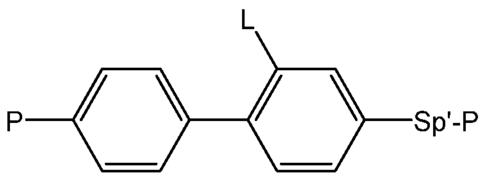

CM-2-5

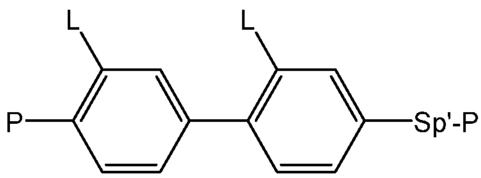

CM-2-6

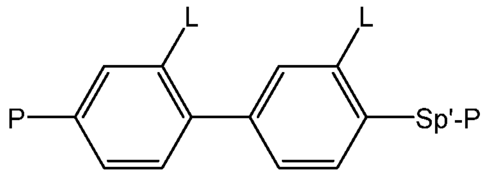
CM-2-7

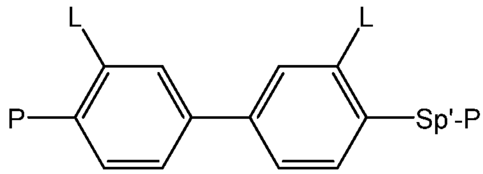
CM-2-8

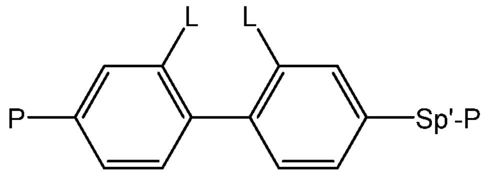
CM-2-9

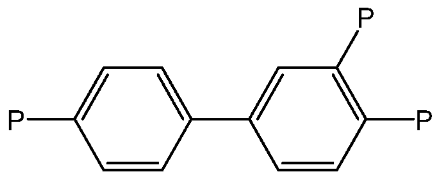
MT-1-1

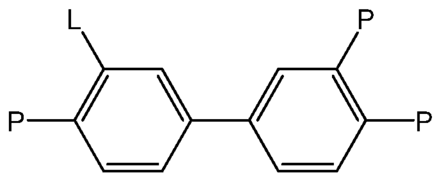
MT-1-2

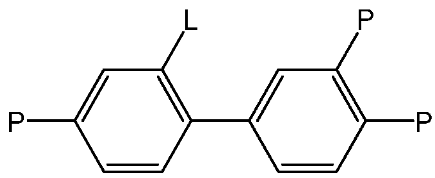
MT-1-3

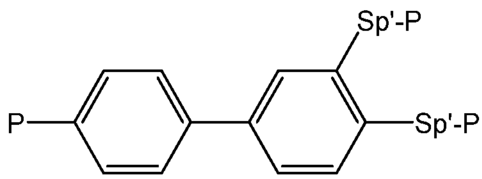
MT-1-4

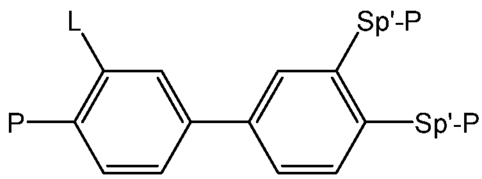
MT-1-5

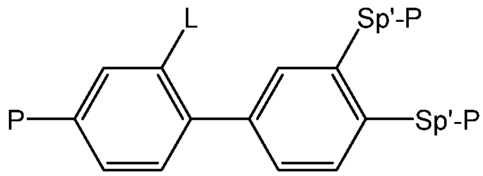

MT-1-6

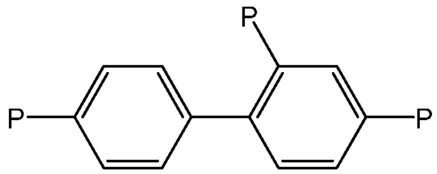

MT-2-1

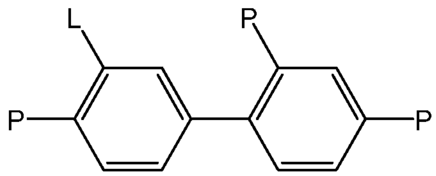

MT-2-2

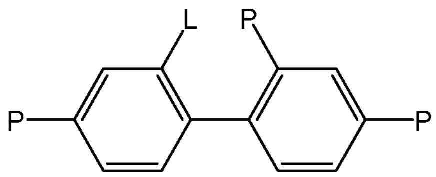

MT-2-3

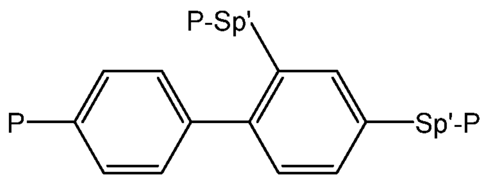

MT-2-4

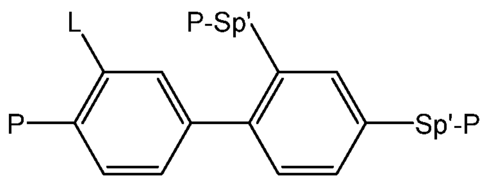

MT-2-5

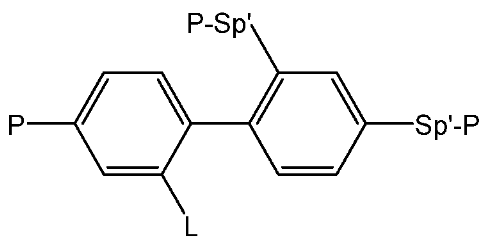

MT-2-6

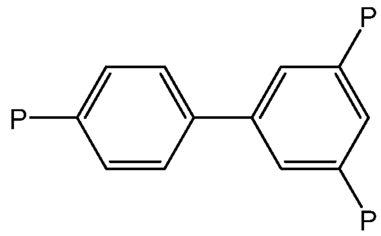

MT-3-1

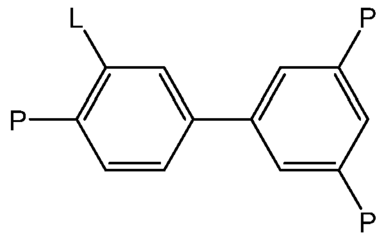

MT-3-2

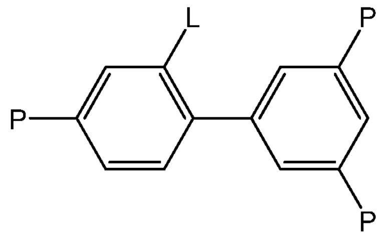

MT-3-3

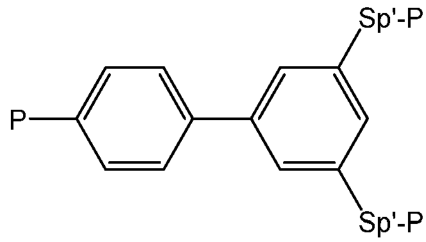

MT-3-4

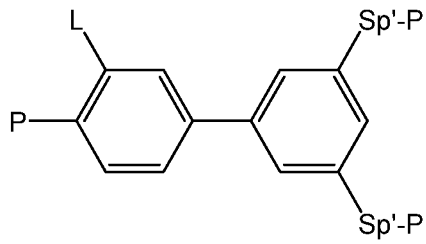

MT-3-5

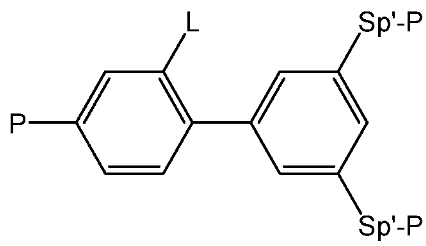

MT-3-6

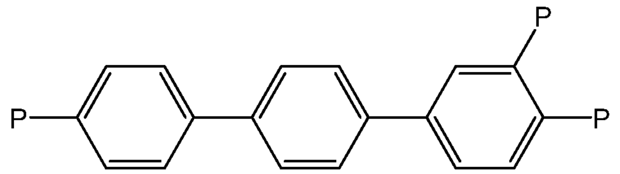
MT-4-1

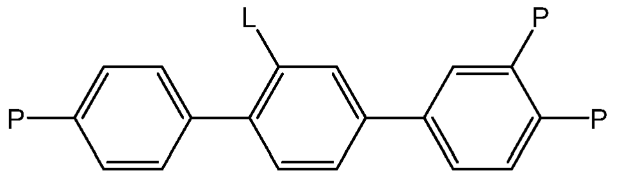
MT-4-2

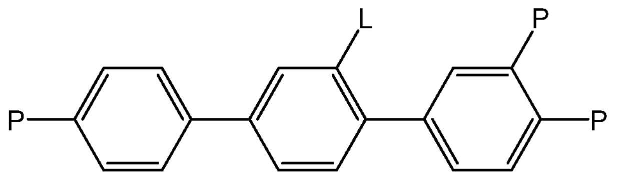
MT-4-3

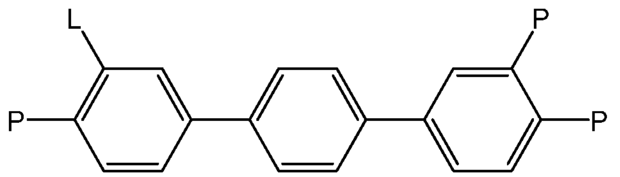
MT-4-4

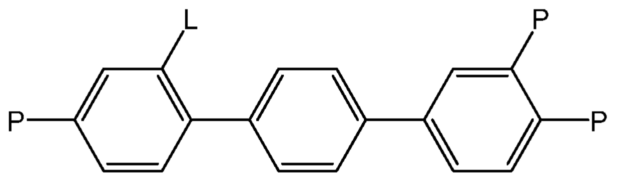
MT-4-5

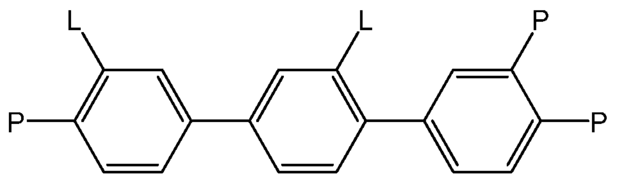
MT-4-6

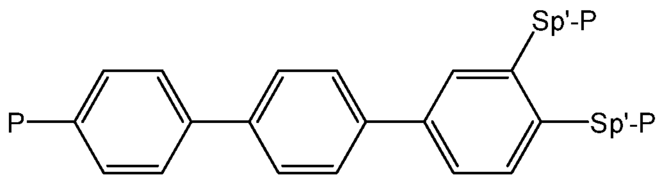
MT-4-7

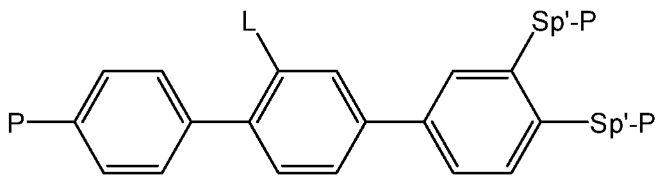
MT-4-8

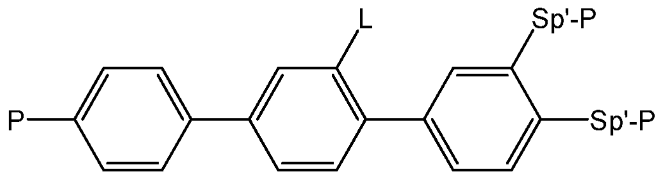

MT-4-9

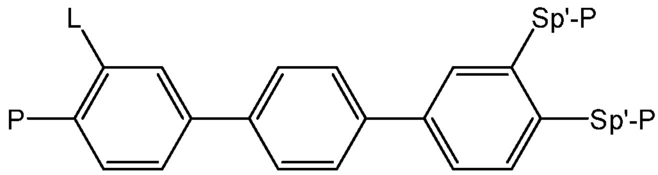

MT-4-10

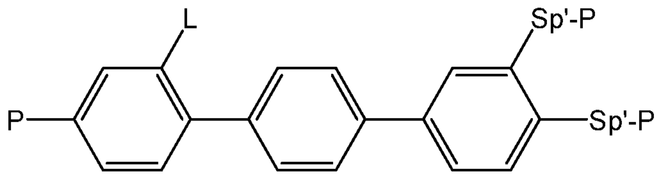

MT-4-11

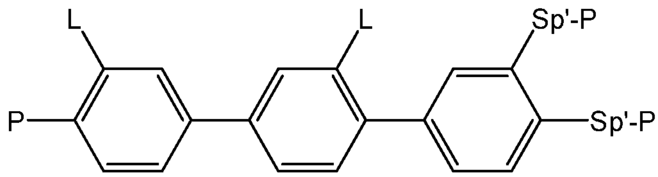

MT-4-12

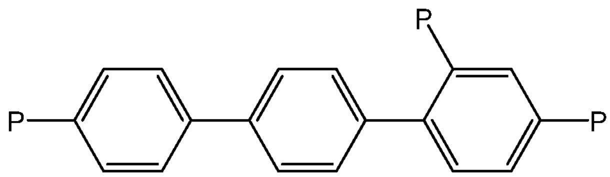

MT-5-1

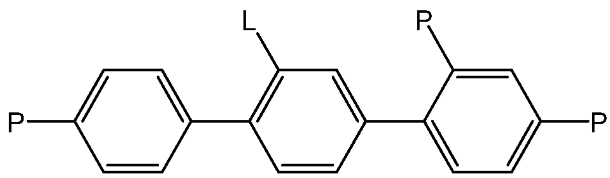

MT-5-2

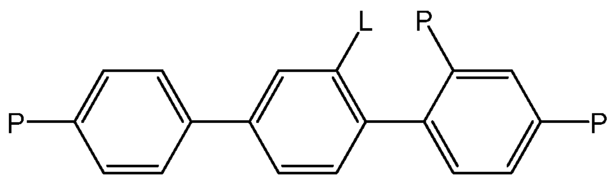

MT-5-3

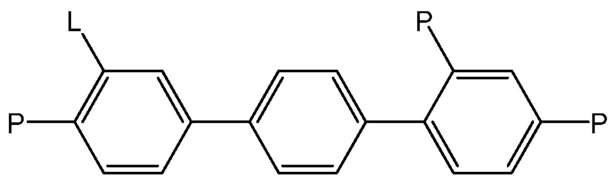

MT-5-4

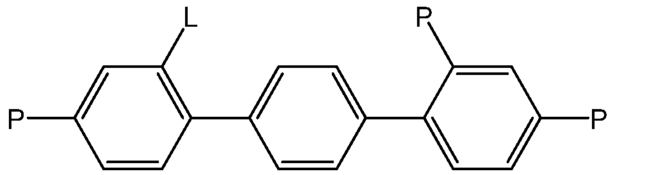

MT-5-5

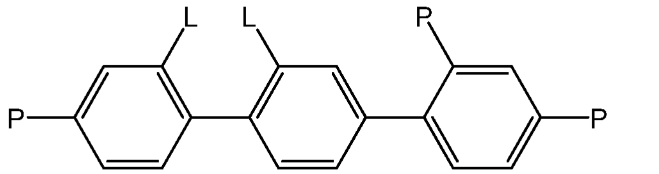

MT-5-6

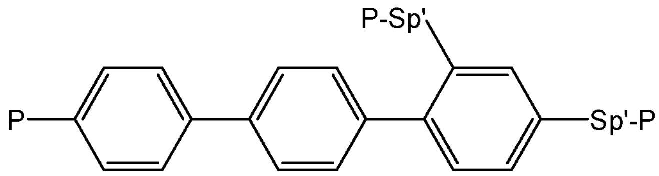

MT-5-7

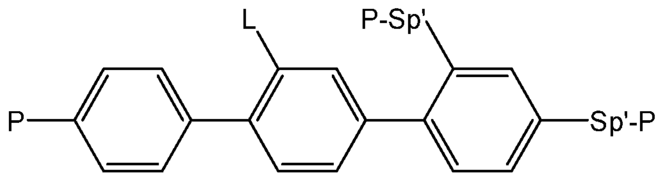

MT-5-8

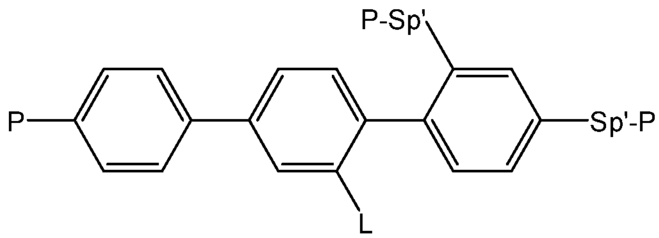

MT-5-9

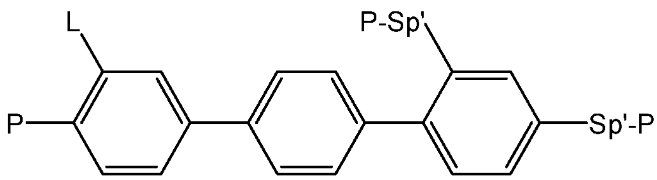

MT-5-10

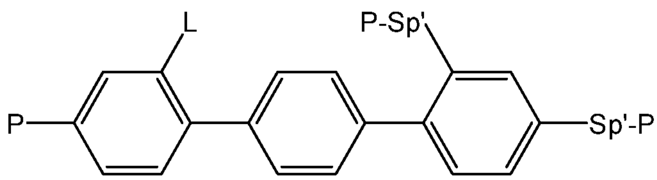

MT-5-11

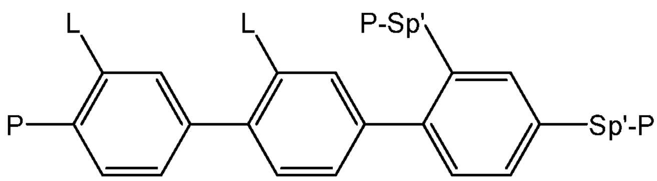

MT-5-12

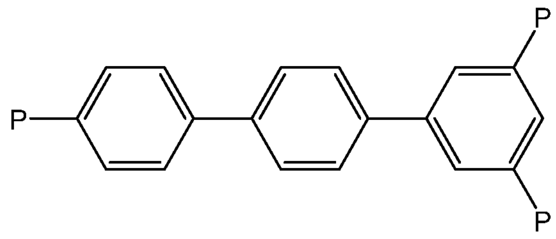

MT-6-1

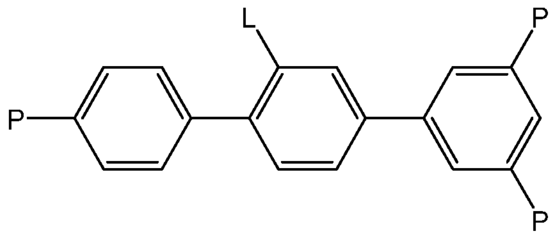

MT-6-2

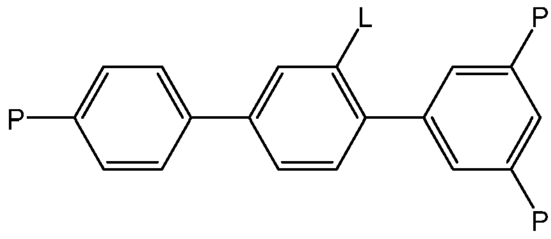

MT-6-3

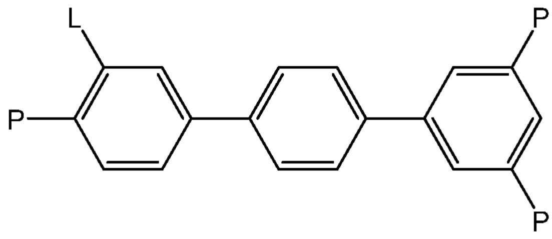

MT-6-4

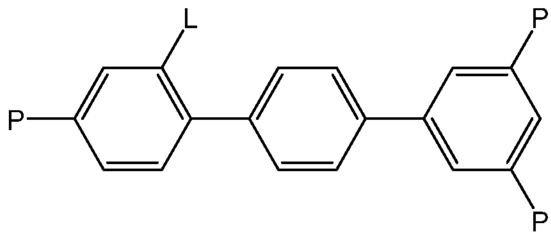

MT-6-5

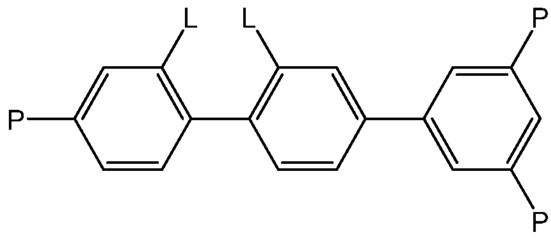

MT-6-6

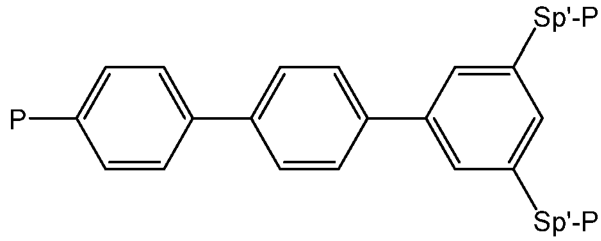

MT-6-7

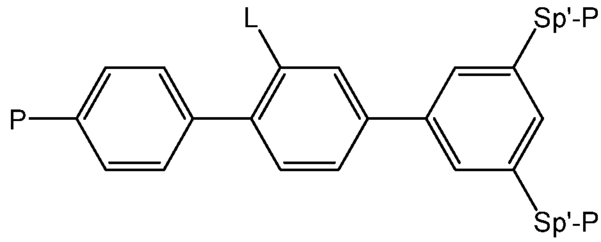

MT-6-8

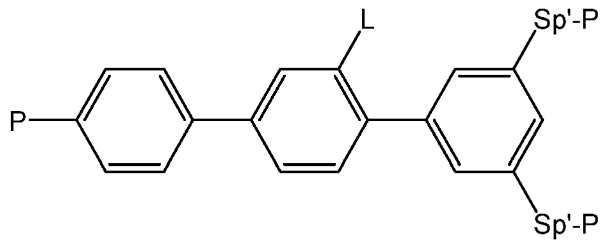

MT-6-9

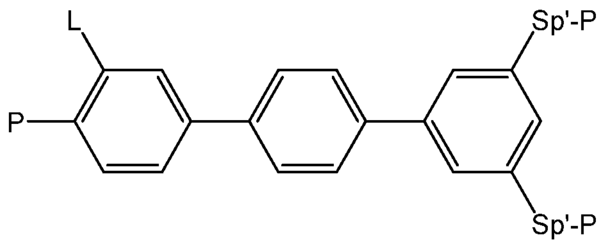

MT-6-10

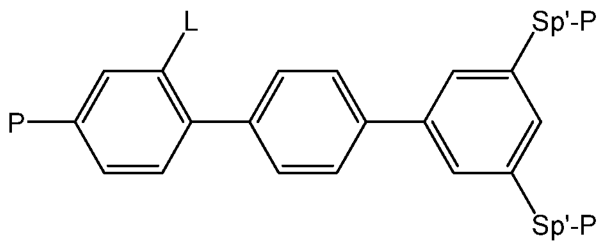

MT-6-11

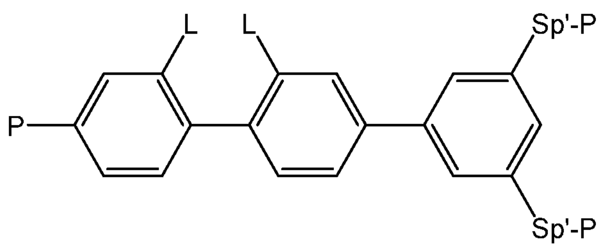

MT-6-12

wherein P, Sp and L have the meanings given in claim 8 and Sp' has one of the meanings given for Sp that is different from a single bond.

**10.** The LC medium according to Claim 8 or 9, **characterized in that** it the additional polymerizable compounds are

selected from the following subformulae

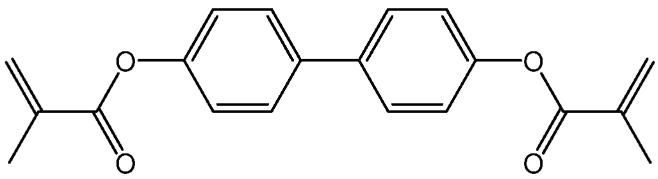

CM-1-1a

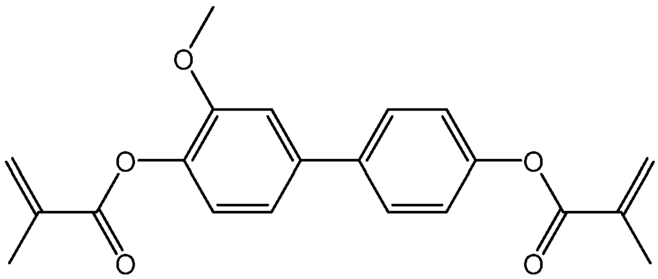

CM-1-2a

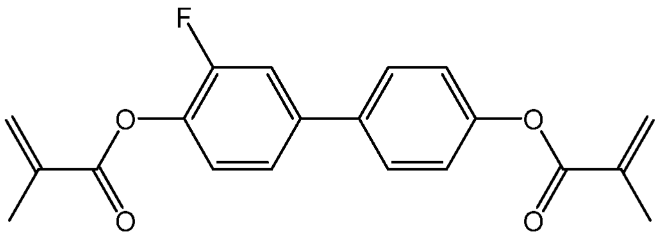

CM-1-2b

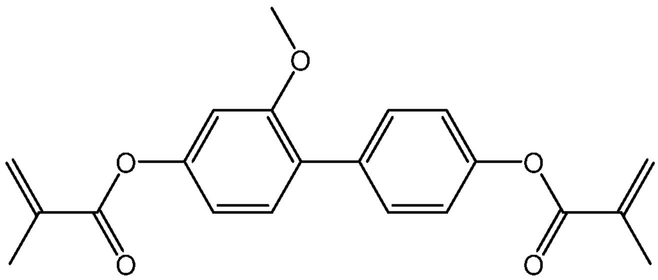

CM-1-3a

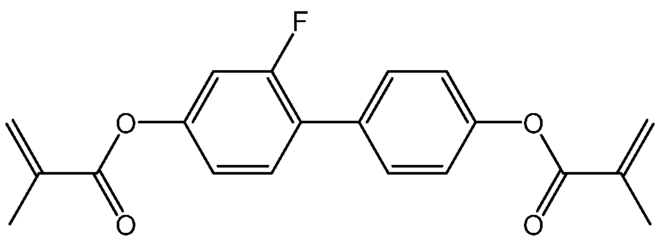

CM-1-3b

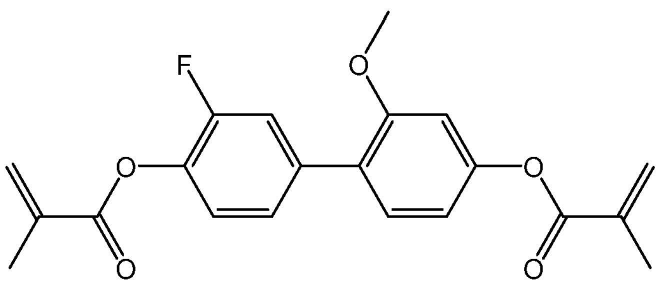

CM-1-4a

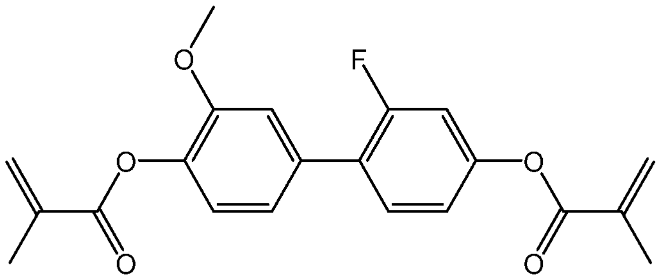

CM-1-4b

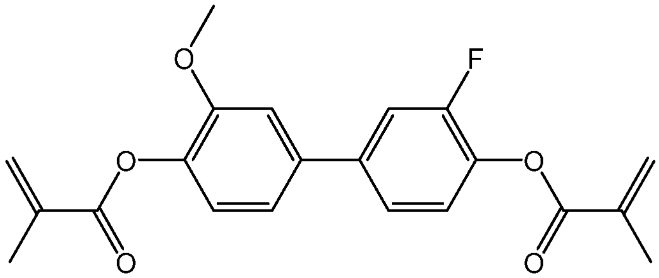

CM-1-5a

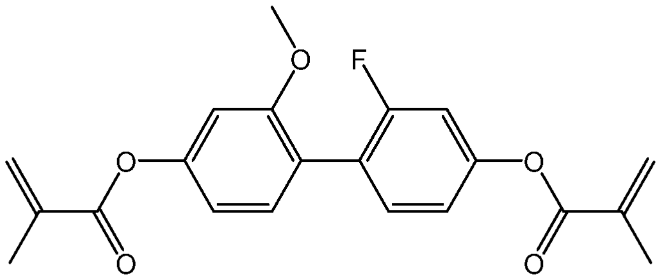

CM-1-6a

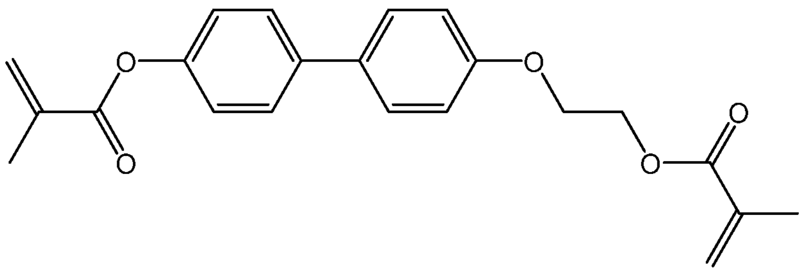

CM-2-1a

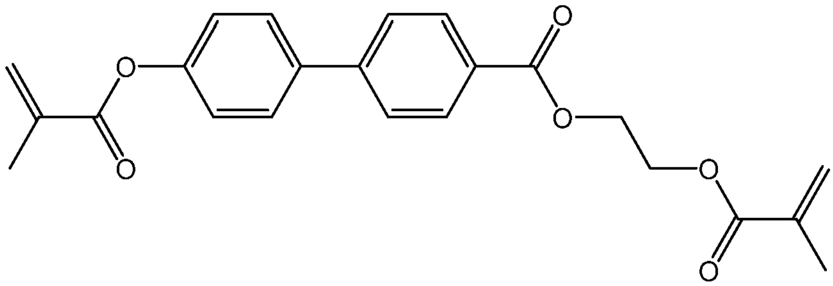

CM-2-1b

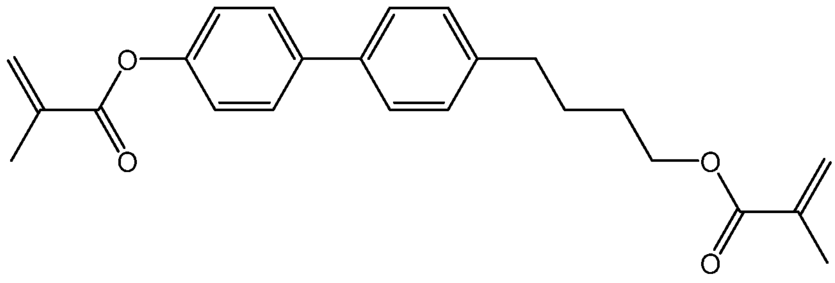

CM-2-1c

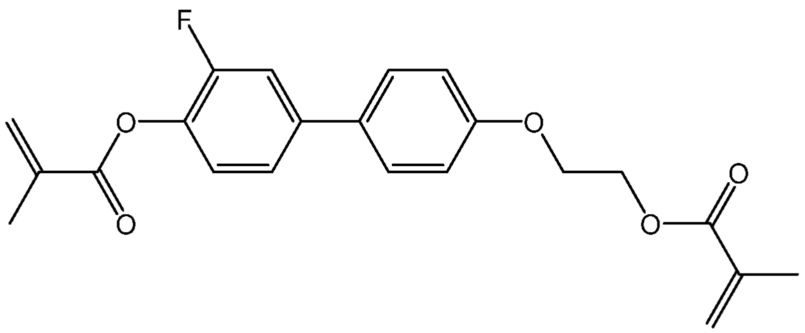

CM-2-2a

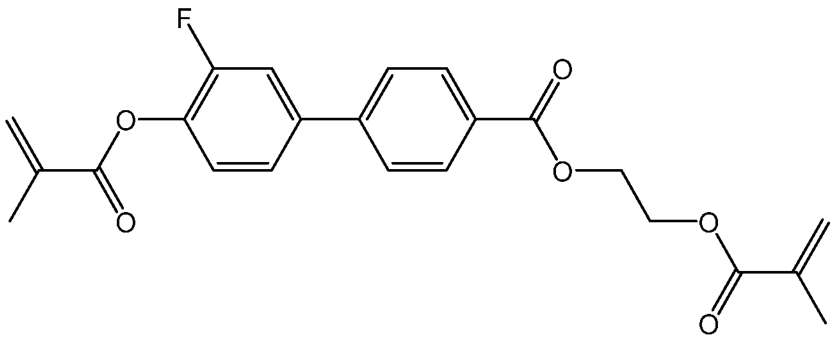

CM-2-2b

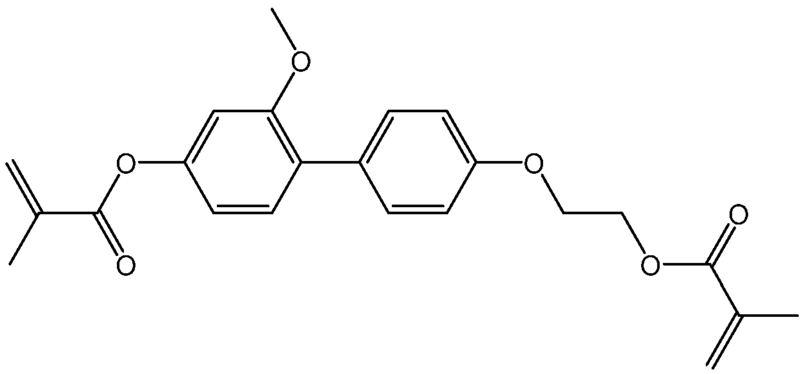

CM-2-3a

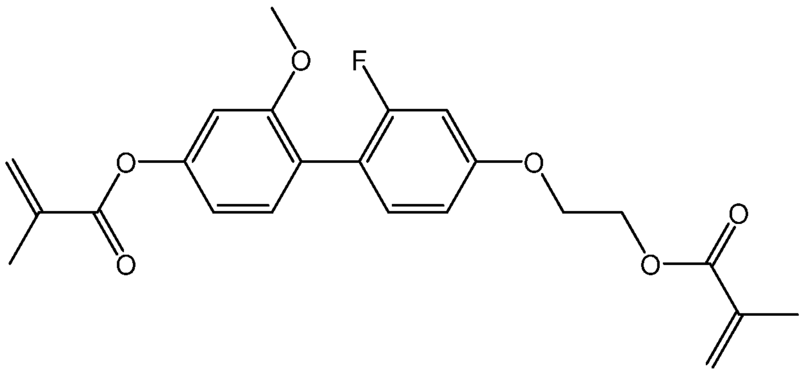

CM-2-9a

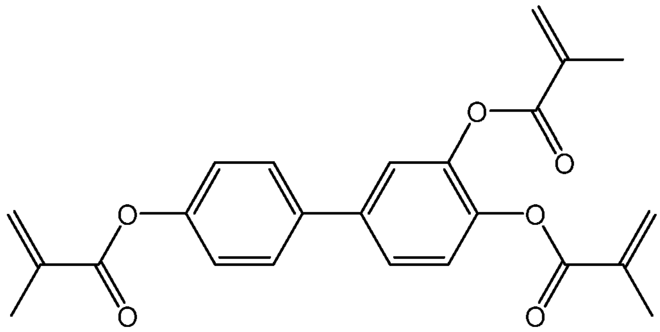

MT-1-1a

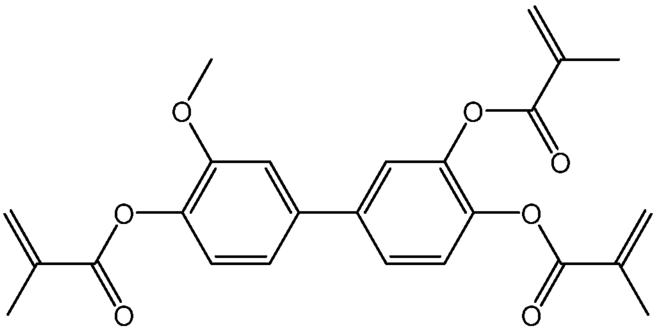

MT-1-2a

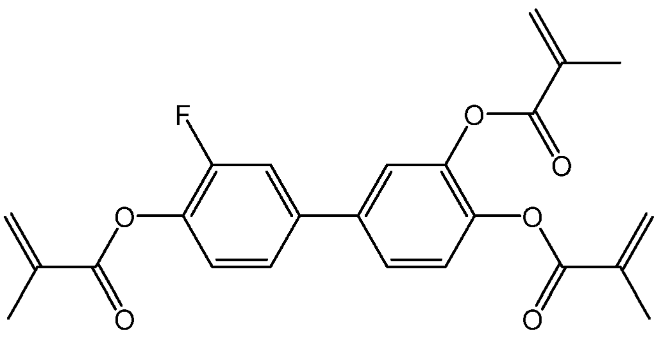

MT-1-2b

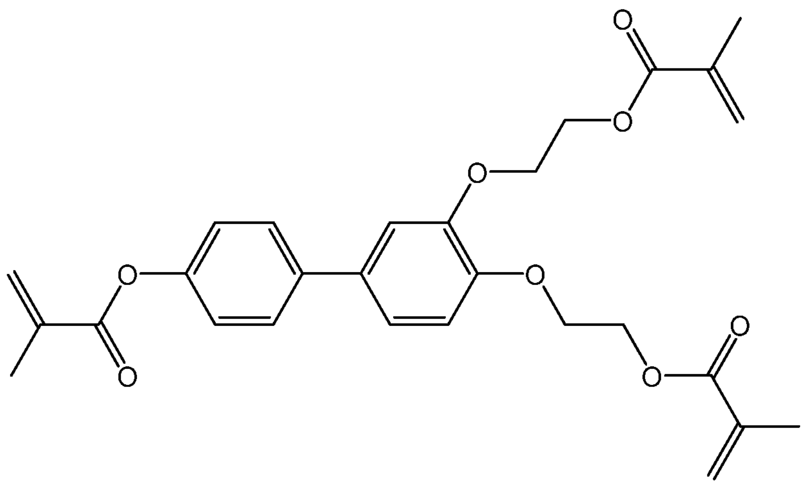

MT-1-4a

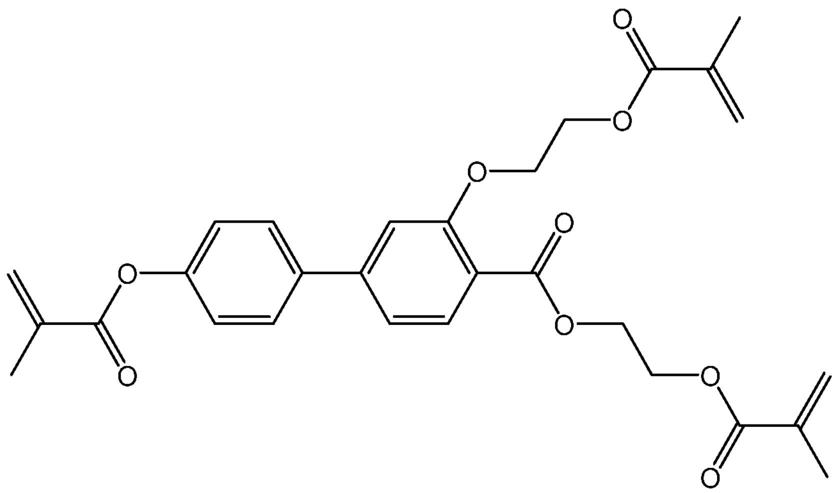

MT-1-4b

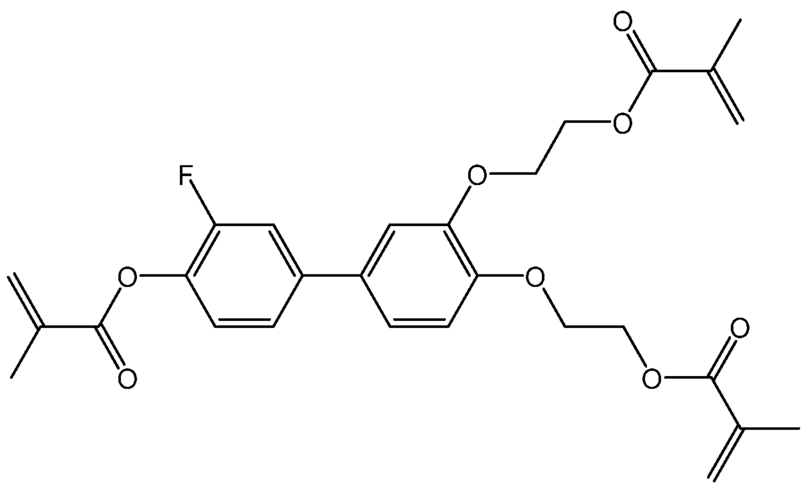

MT-1-5a

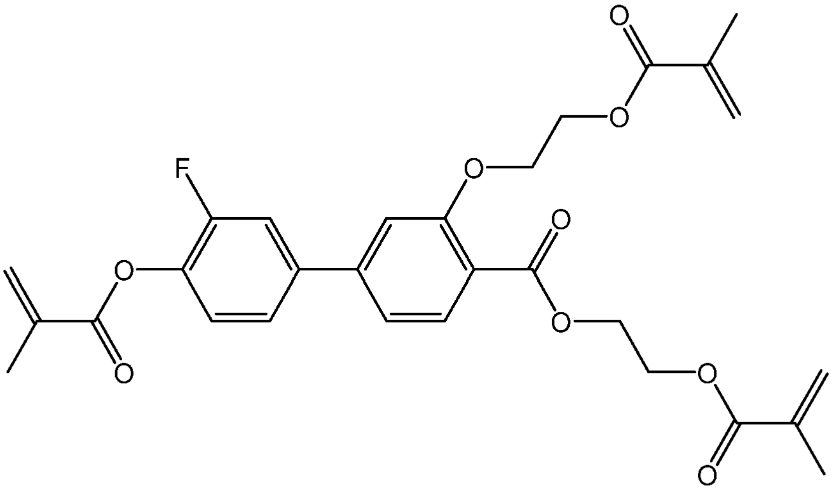

MT-1-5b

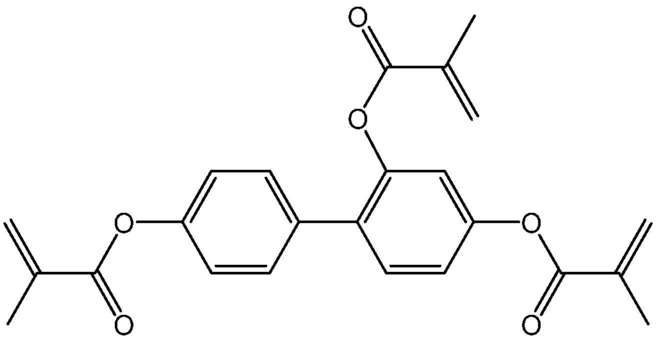

MT-2-1a

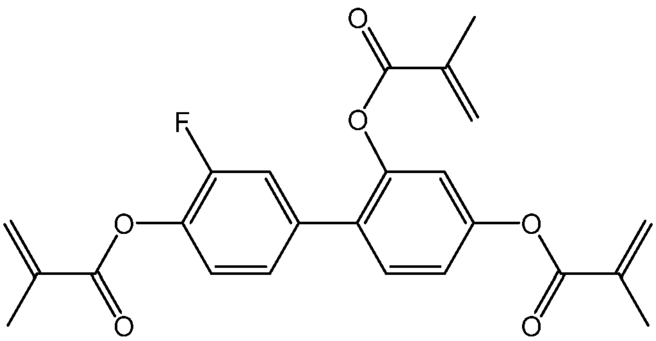

MT-2-2a

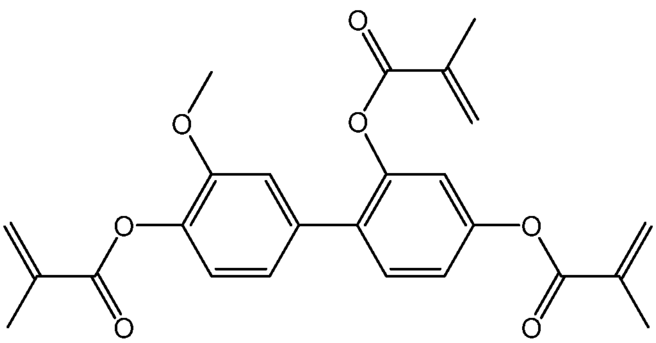

MT-2-2b

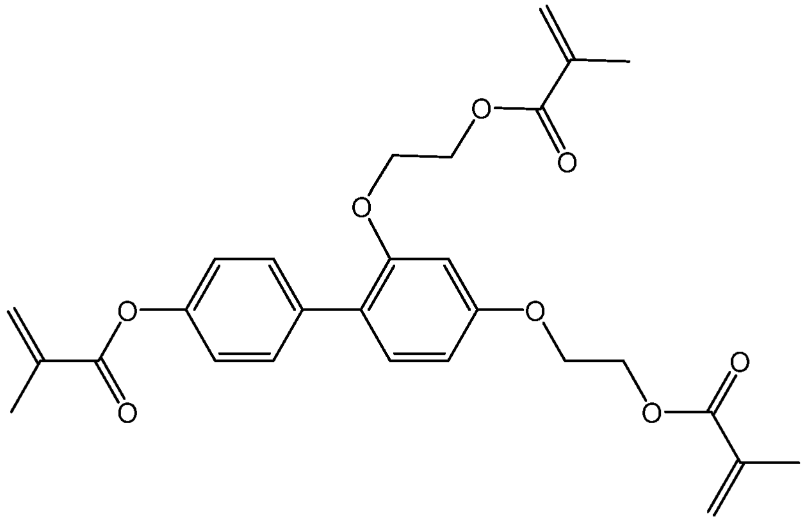

MT-2-4a

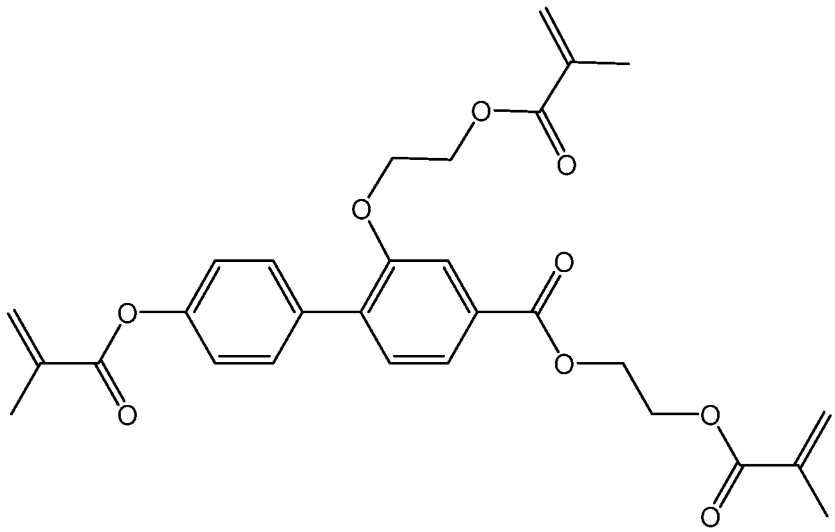

MT-2-4b

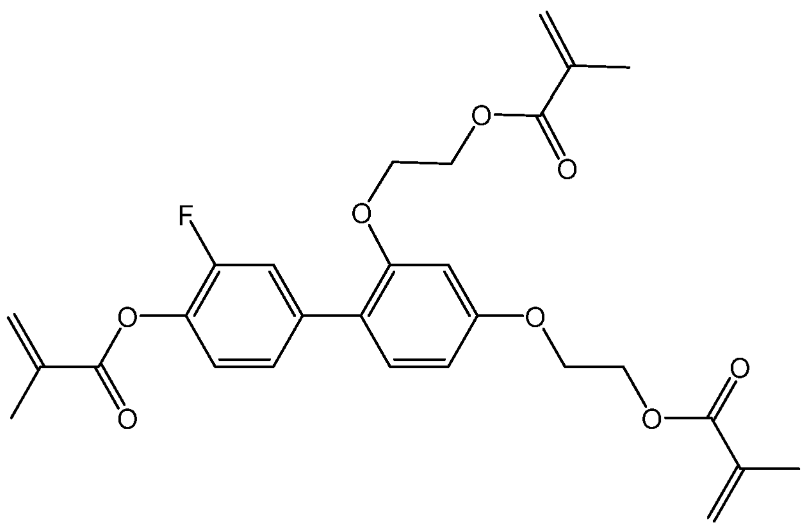

MT-2-5a

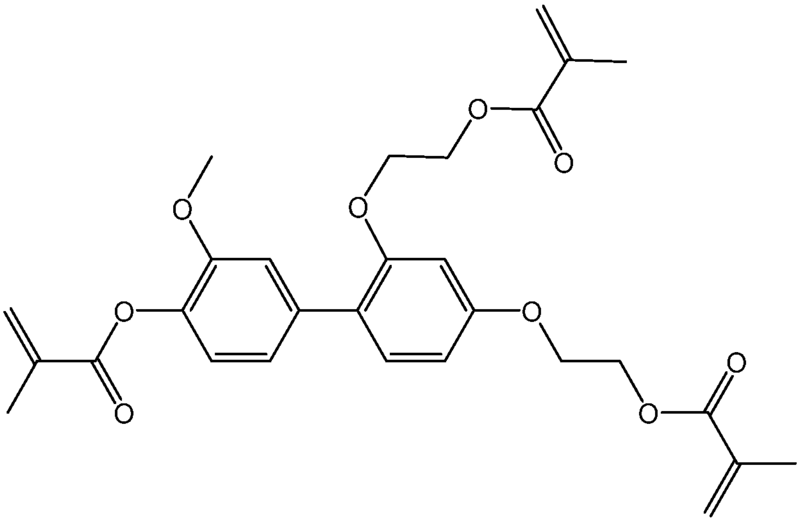

MT-2-5b

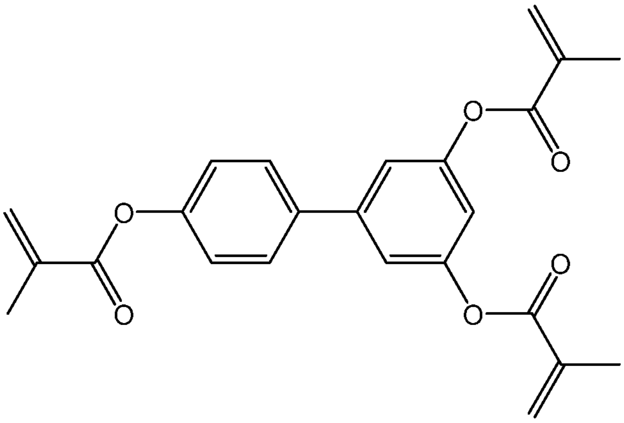

MT-3-1a

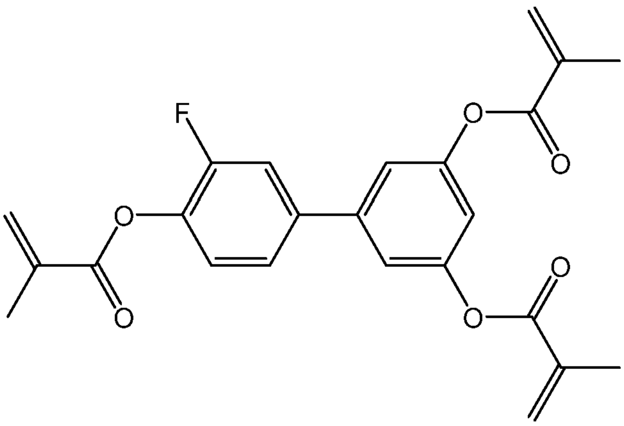

MT-3-2a

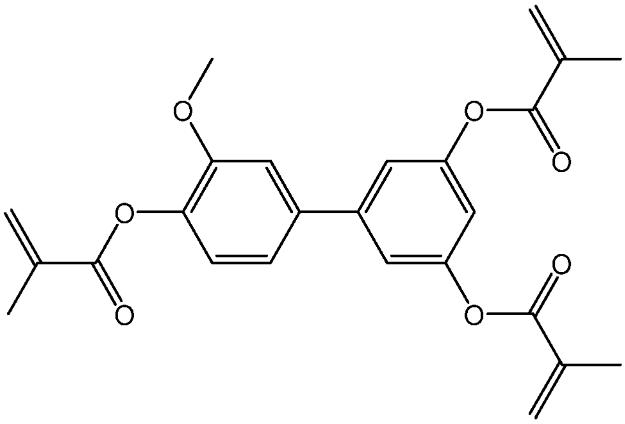

MT-3-2b

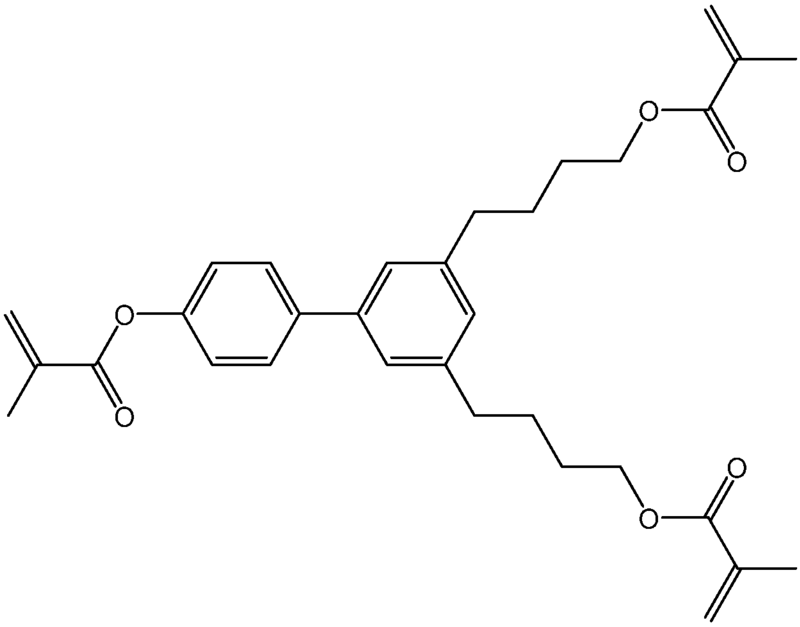

MT-3-4a

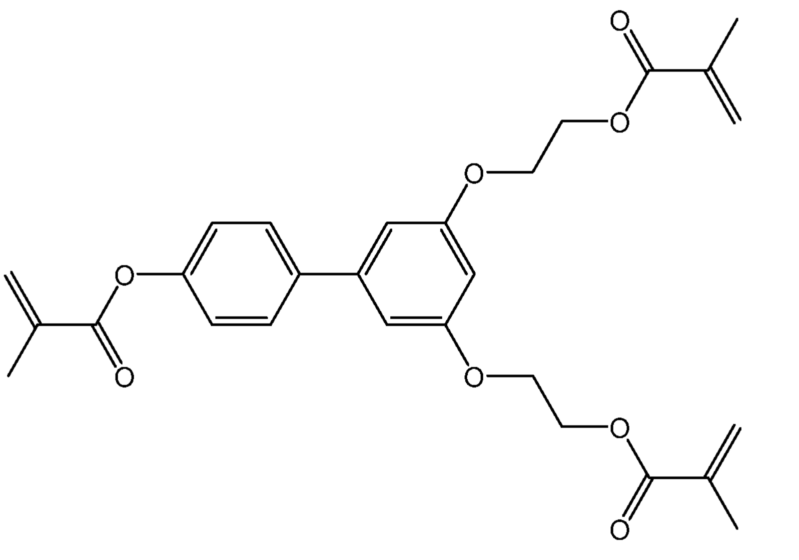

MT-3-4b

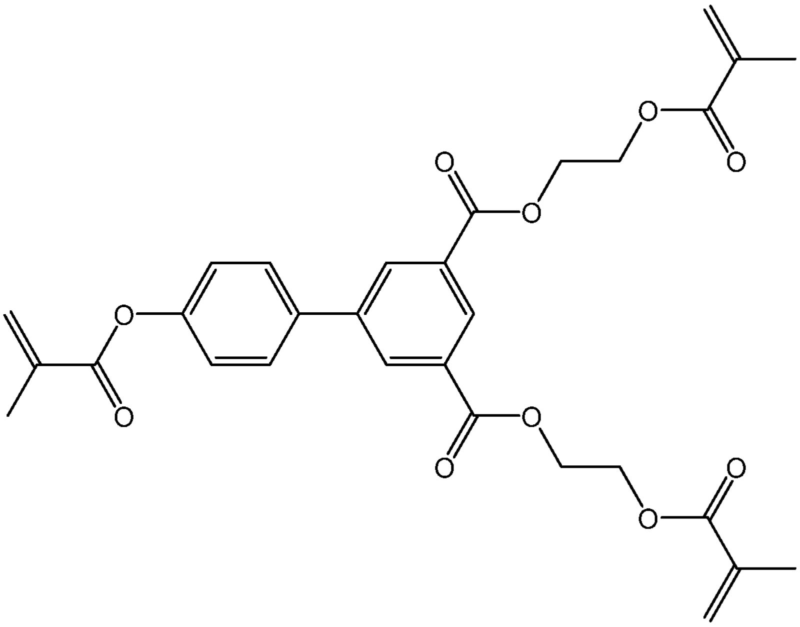

MT-3-4c

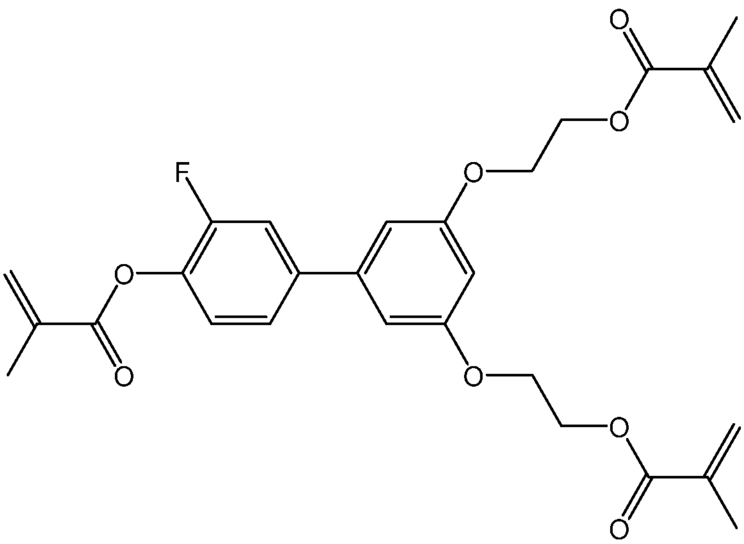

MT-3-5a

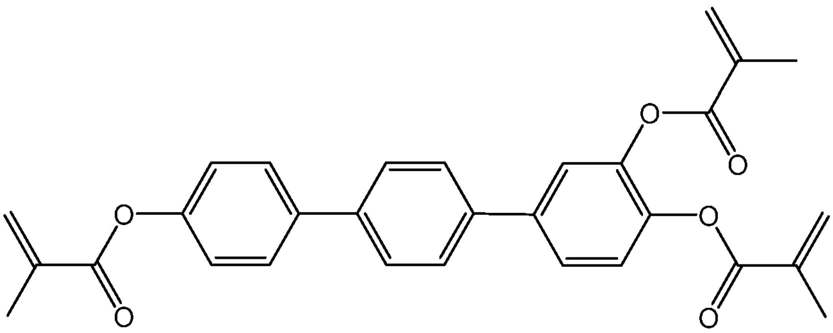

MT-4-1a

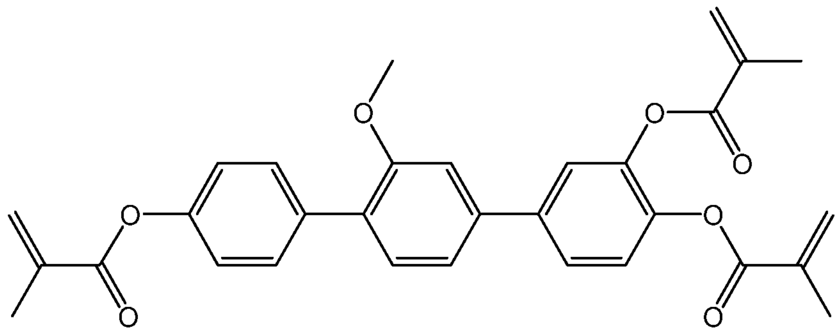

MT-4-2a

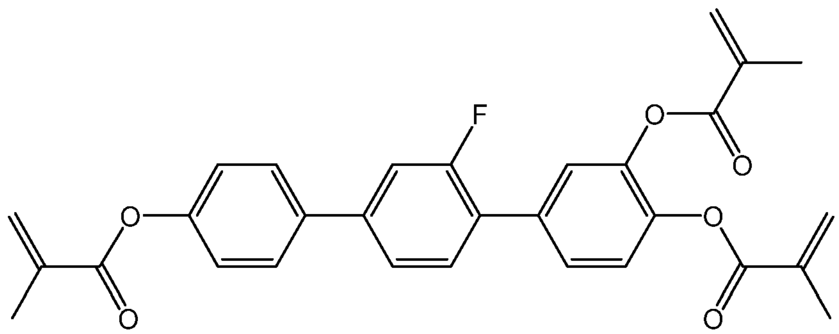

MT-4-3a

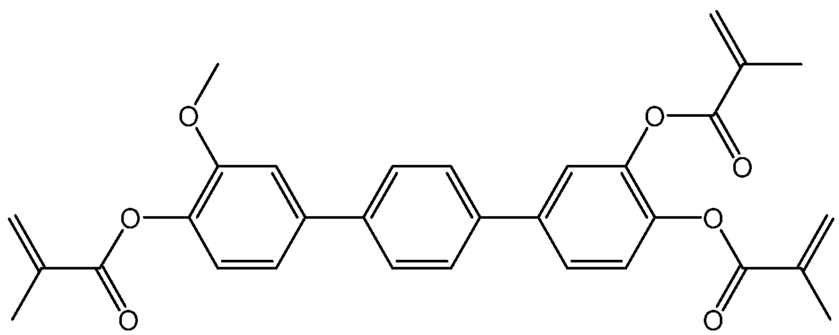

MT-4-4a

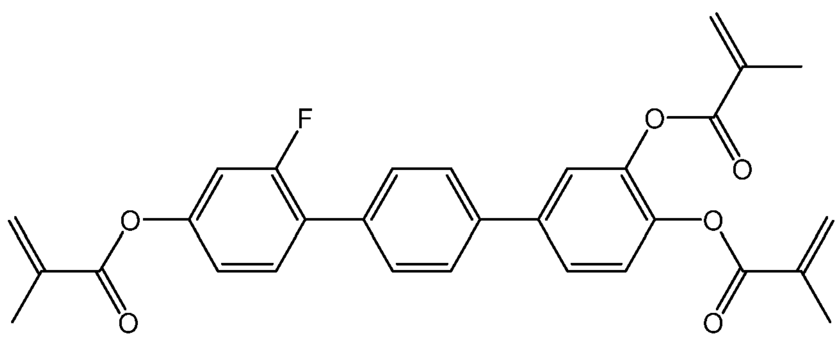

MT-4-5a

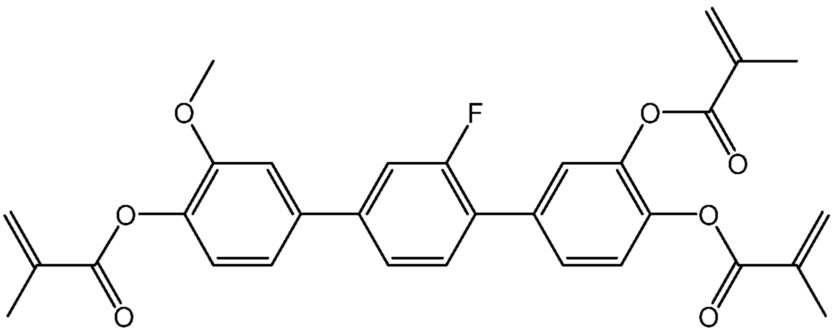

MT-4-6a

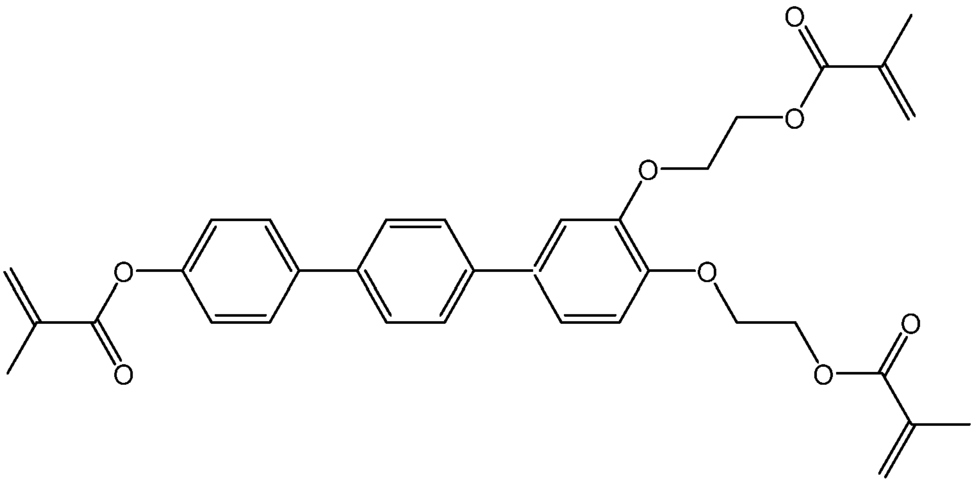

MT-4-7a

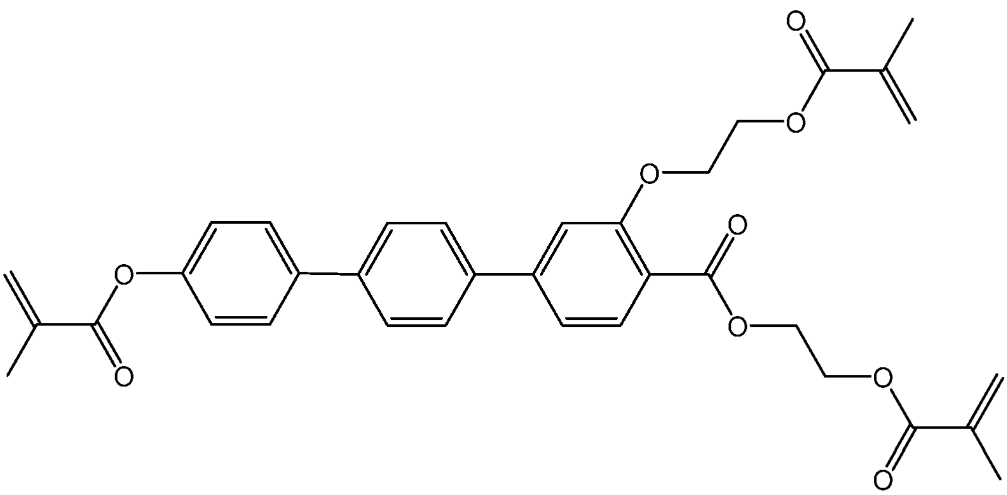

MT-4-7b

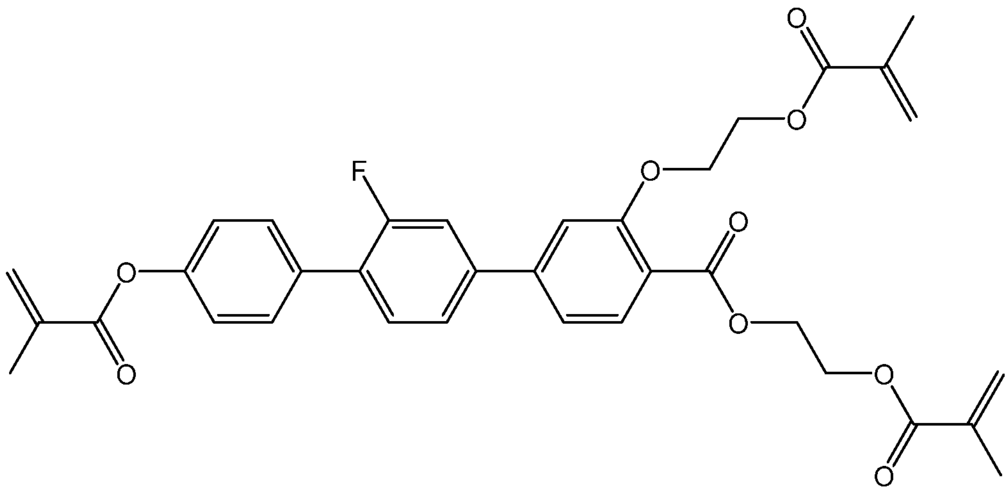

MT-4-8a

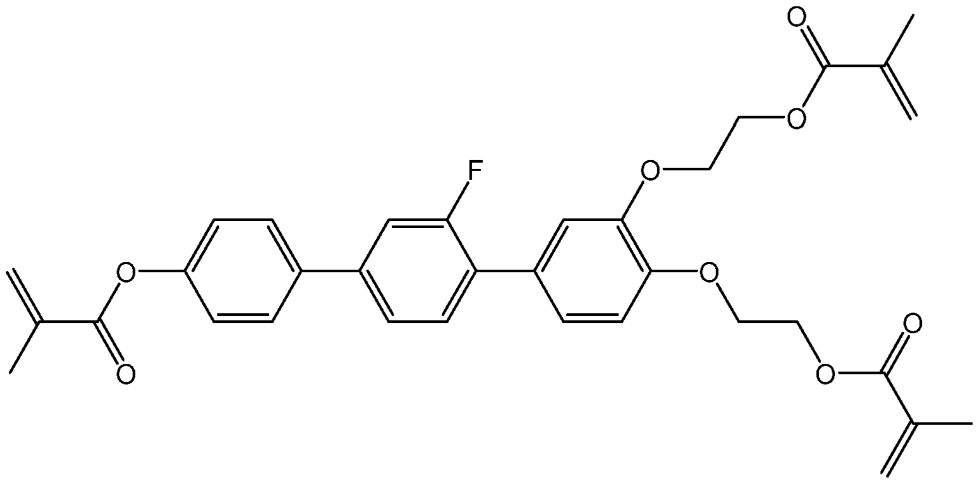

MT-4-9a

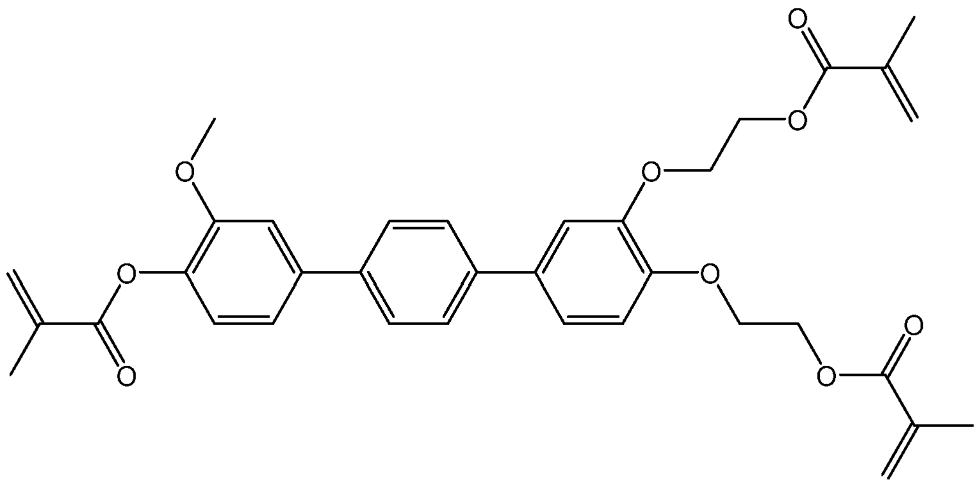

MT-4-10a

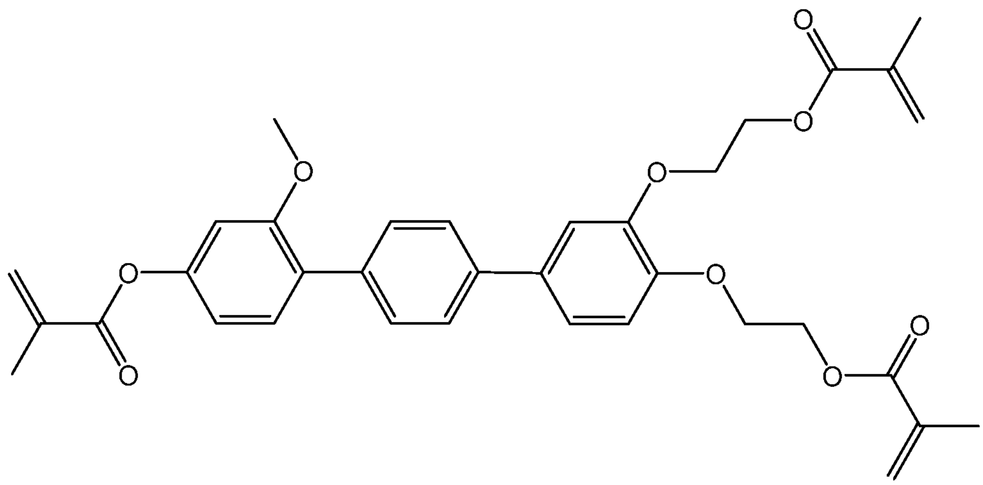

MT-4-11a

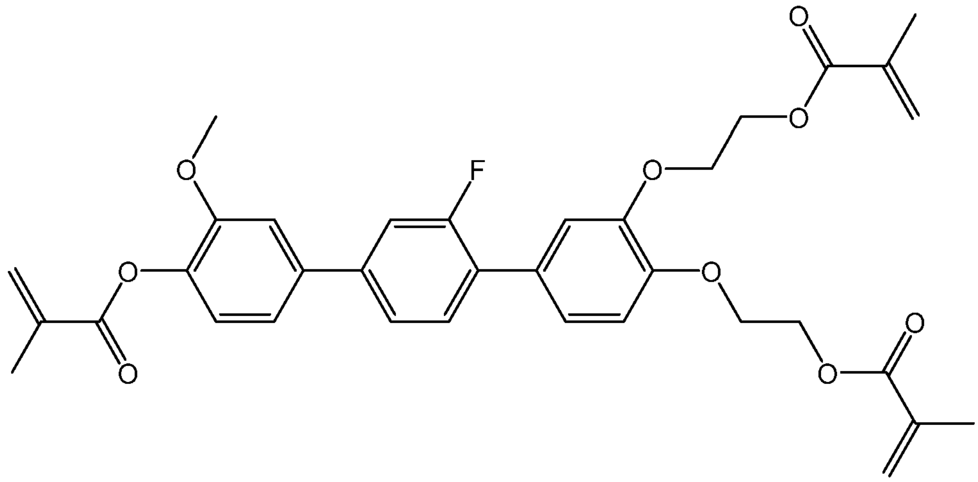

MT-4-12a

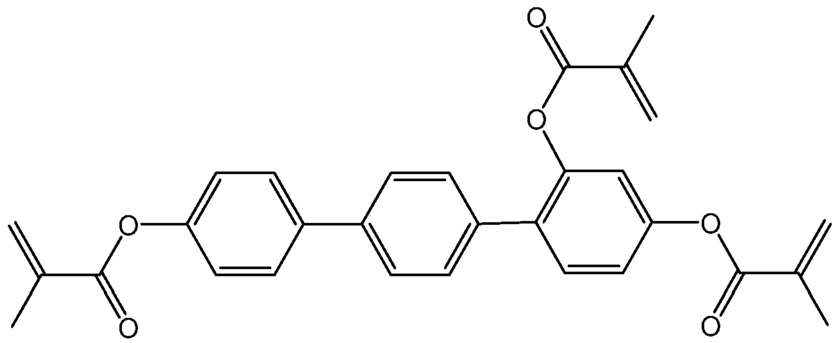

MT-5-1a

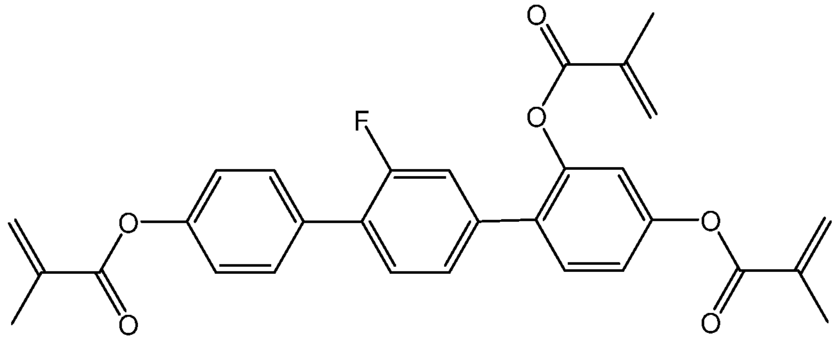

MT-5-2a

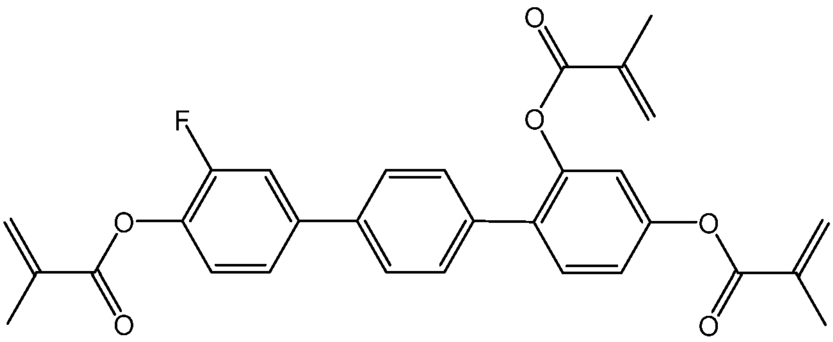

MT-5-4a

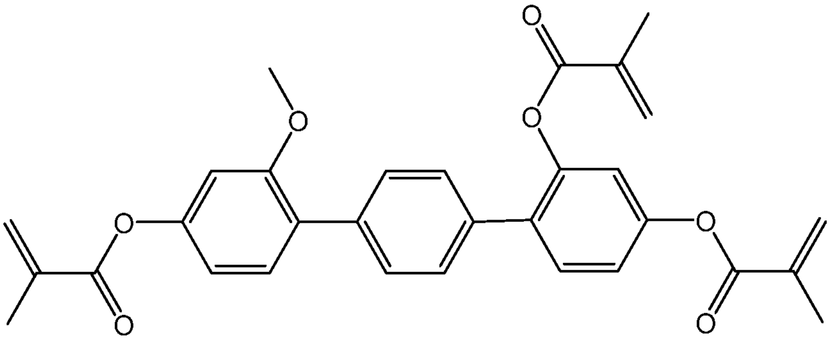

MT-5-5a

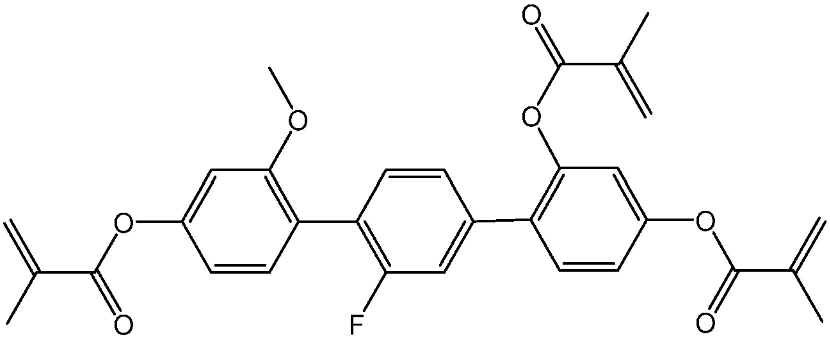

MT-5-6a

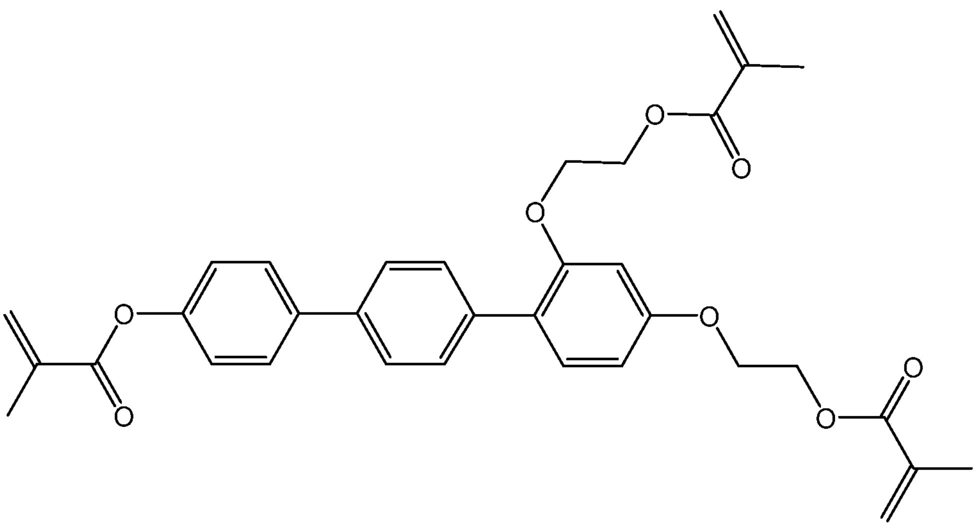

MT-5-7a

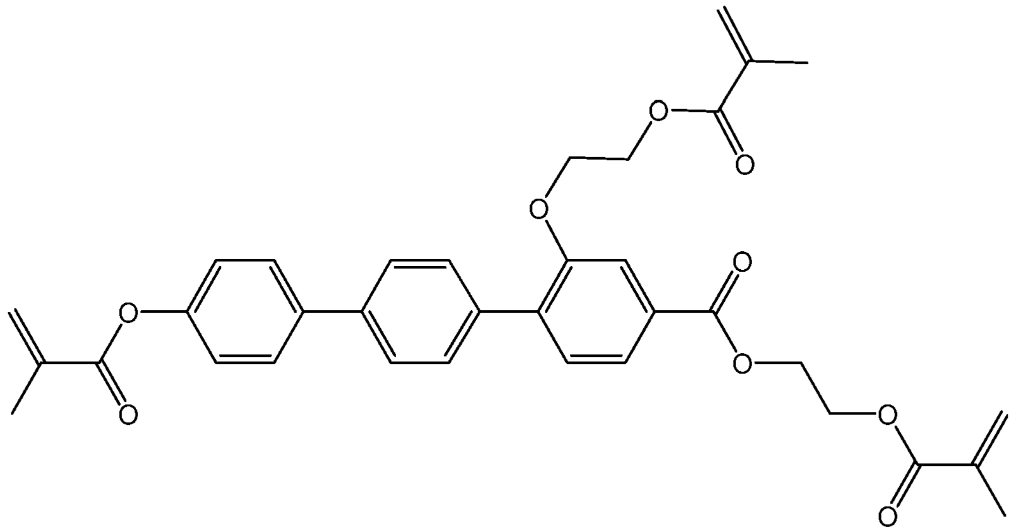

MT-5-7b

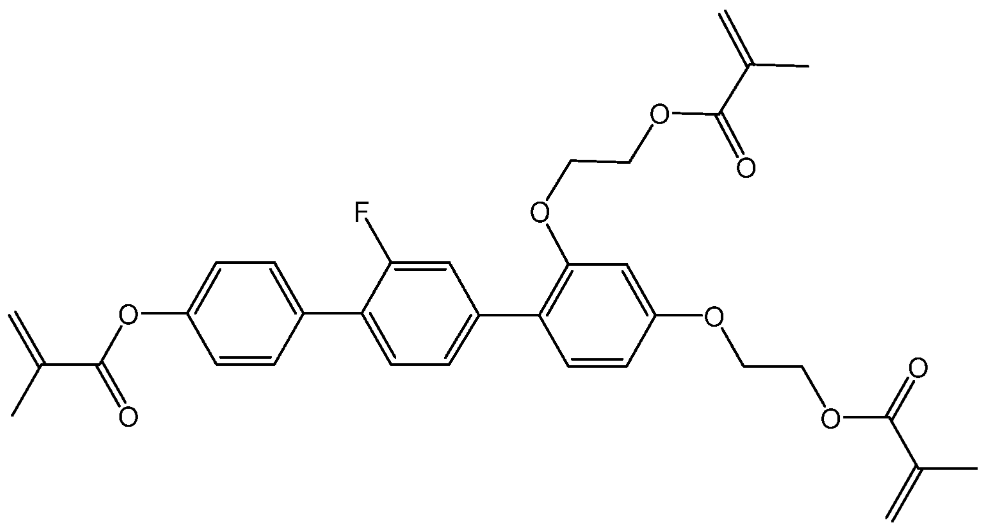

MT-5-8a

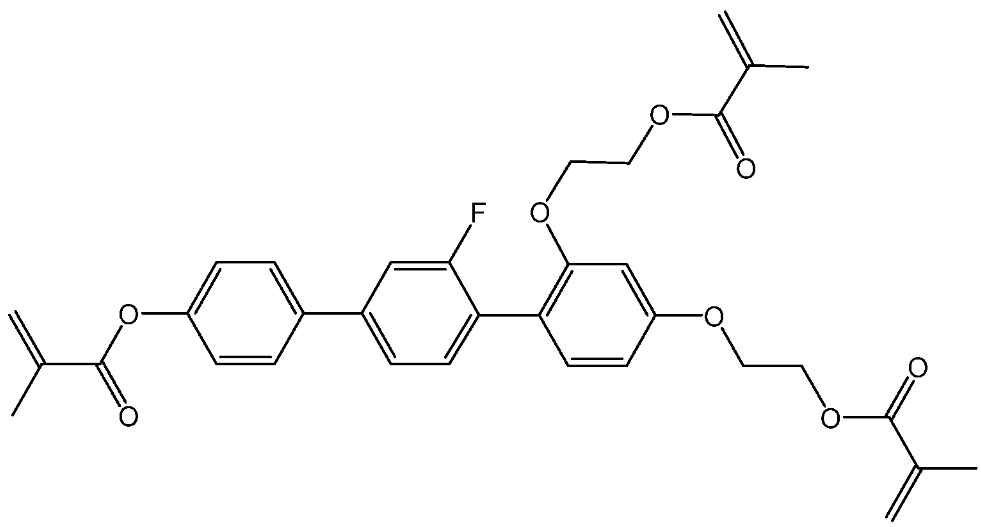

MT-5-9a

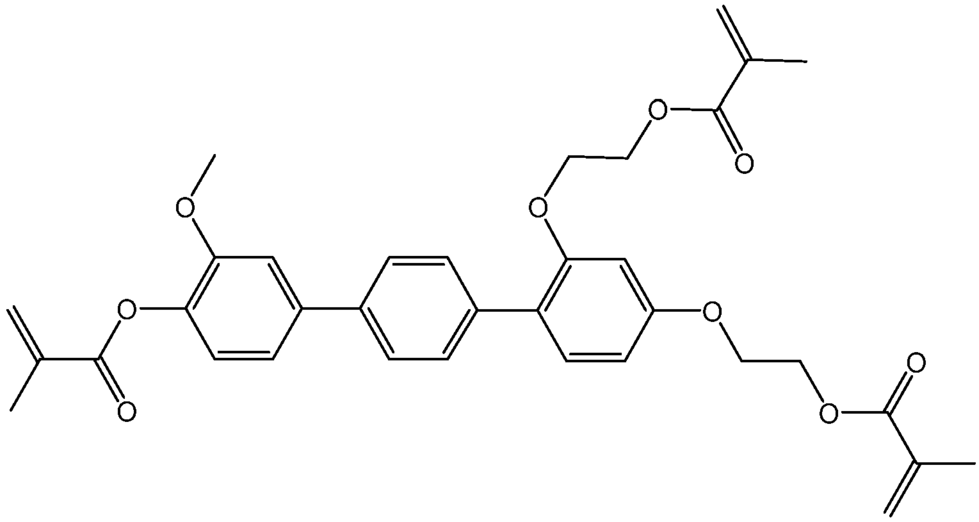

MT-5-10a

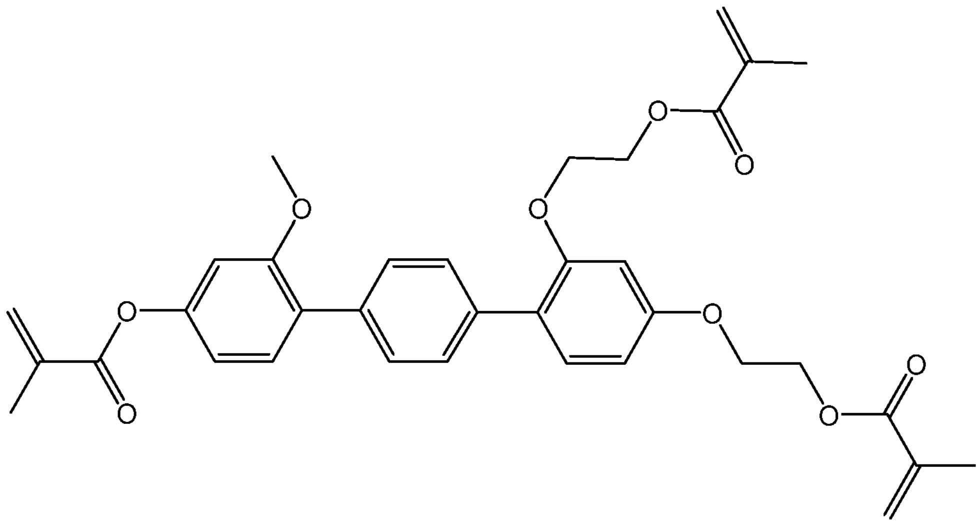

MT-5-11a

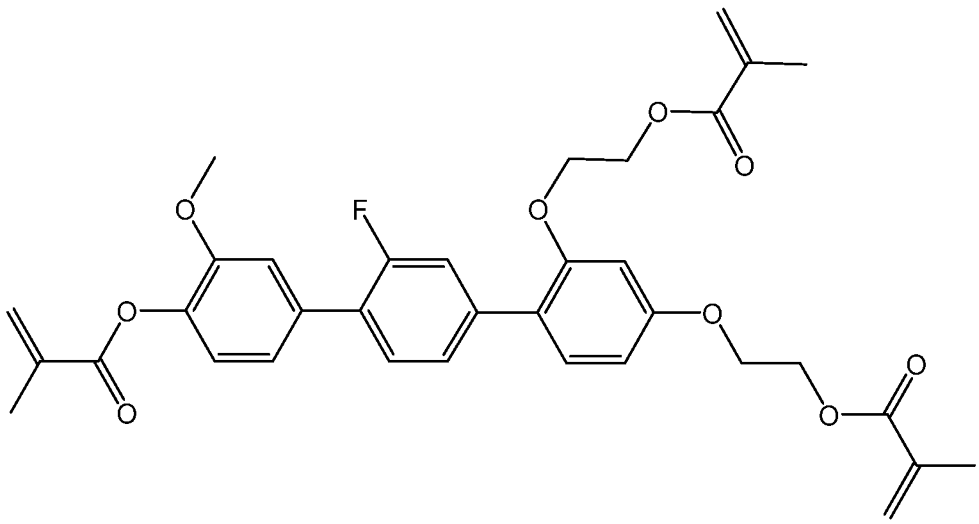

MT-5-12a

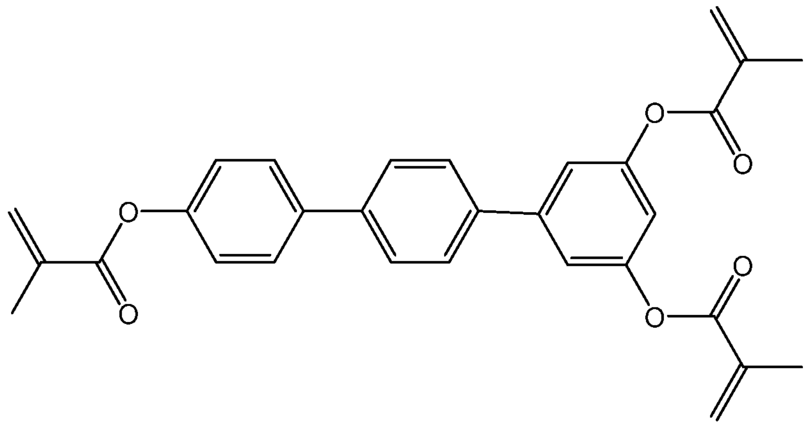

MT-6-1a

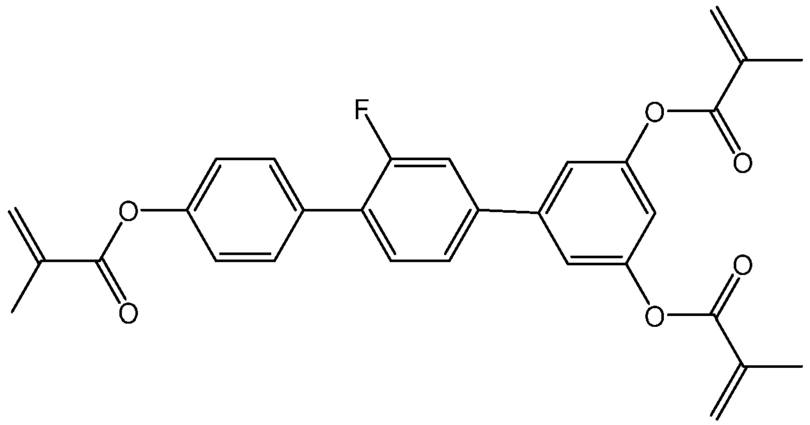

MT-6-2a

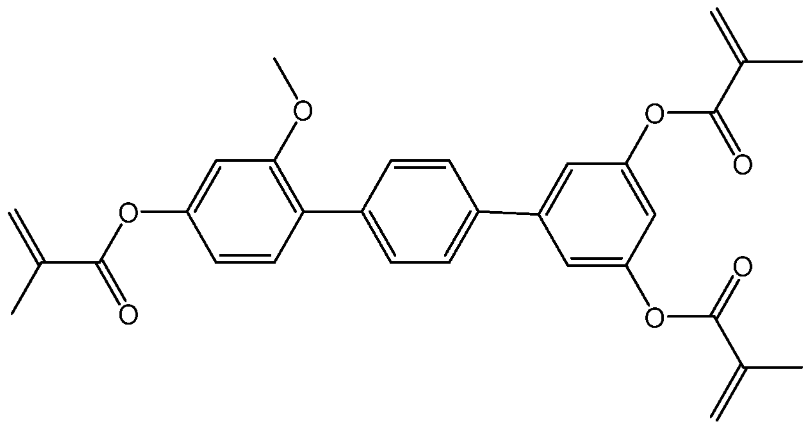

MT-6-5a

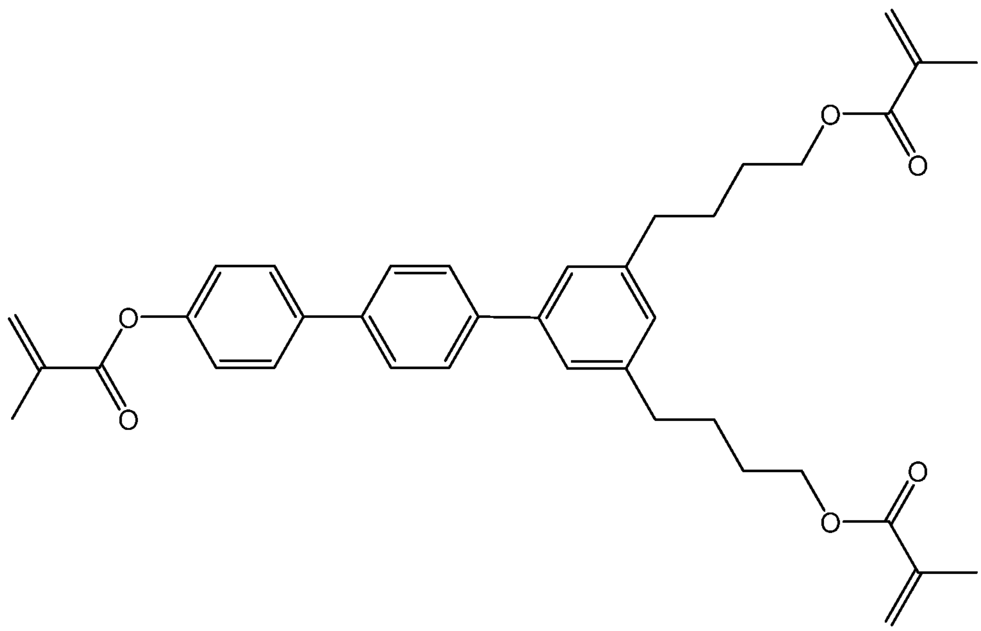

MT-6-7a

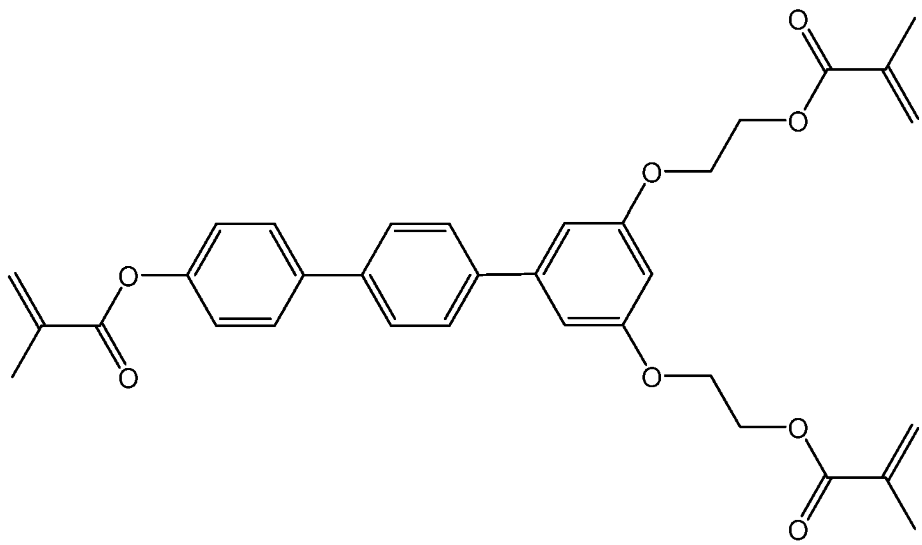

MT-6-7b

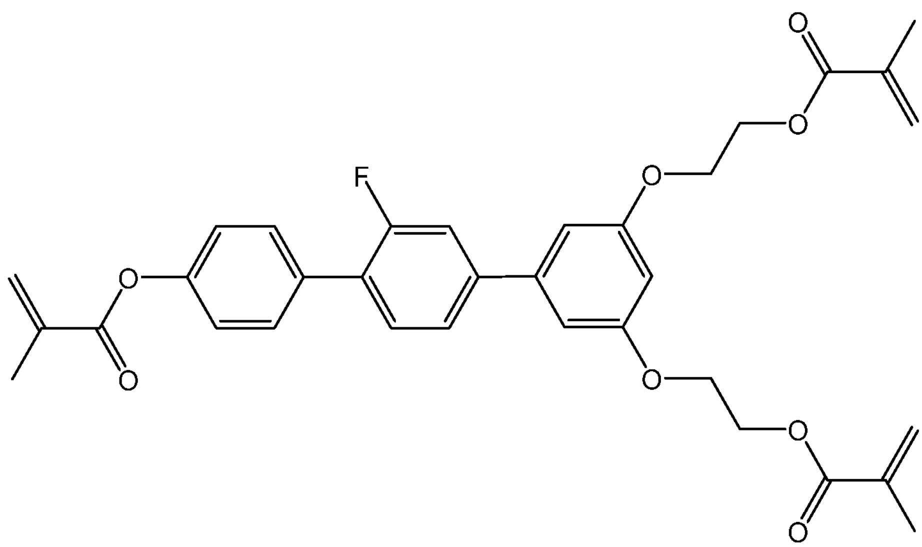

MT-6-8a

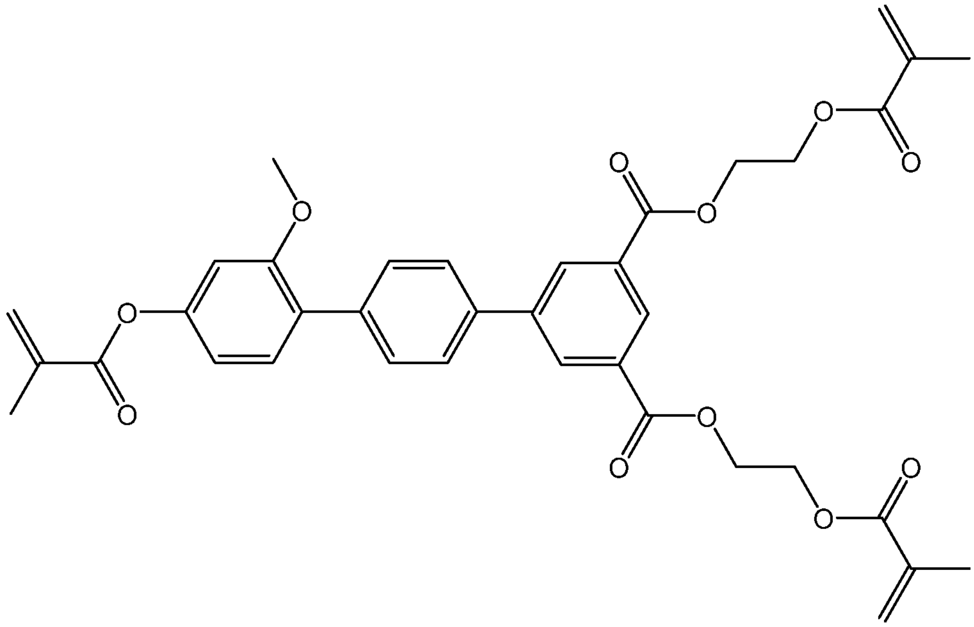

MT-6-11a

11. The LC medium according to one or more of Claims 1 to 10, **characterized in that** it contains one or more compounds of formula II selected from the group consisting of compounds of the formulae IIA, IIB, IIC and IID

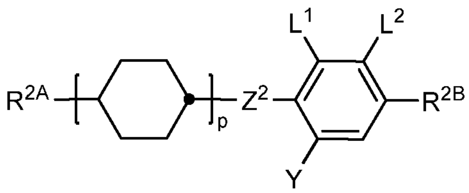

IIA

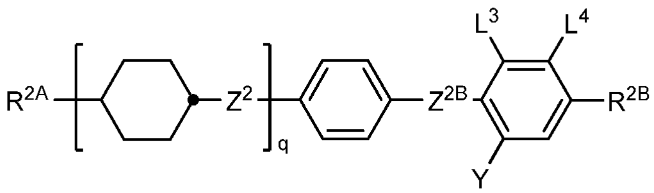

IIB

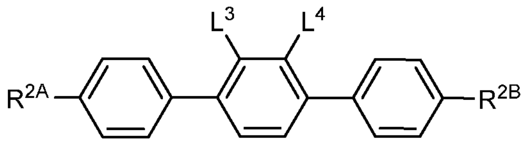

IIC

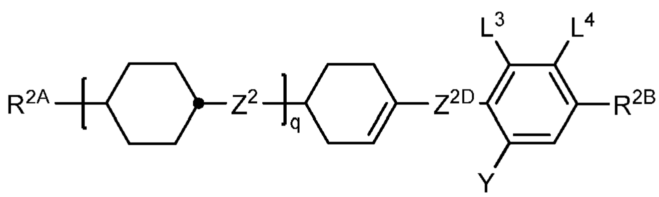

IID

in which

$R^{2A}$ and $R^{2B}$ each, independently of one another, denote H, an alkyl or alkenyl radical having up to 15 C atoms which is un-substituted, monosubstituted by CN or $CF_3$ or at least monosubstituted by halogen, where, in

addition, one or more $CH_2$ groups in these radicals may be replaced by -O-, -S-,

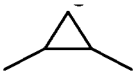, 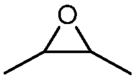, 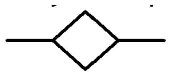, 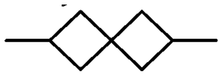,

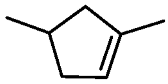, 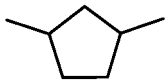,

-C≡C-, $-CF_2O-$, $-OCF_2-$, -OC-O- or -O-CO- in such a way that O atoms are not linked directly to one another,
$L^1$ to $L^4$ each, independently of one another, denote F, Cl, $CF_3$ or $CHF_2$,
Y denotes H, F, Cl, $CF_3$, $CHF_2$ or $CH_3$, preferably H or $CH_3$, particularly preferably H,
$Z^2$, $Z^{2B}$ and $Z^{2D}$ each, independently of one another, denote a single bond, $-CH_2CH_2-$, -CH=CH-, $-CF_2O-$, $-OCF_2-$, $-CH_2O-$, $-OCH_2-$, -COO-, -OCO-, $-C_2F_4-$, -CF=CF-, $-CH=CHCH_2O-$,
p denotes 0, 1 or 2, and
q on each occurrence, identically or differently, denotes 0 or 1.

**12.** The LC medium according to any one of Claims 1 to 11, **characterized in that** it additionally comprises one or more compounds of formula III

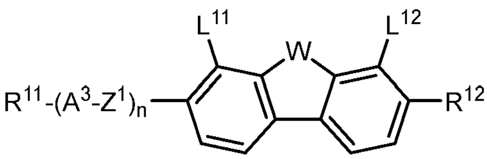

III

in which

$R^{11}$ and $R^{12}$ each, independently of one another, denote H, an alkyl or alkoxy radical having 1 to 15 C atoms, where one or more $CH_2$ groups in these radicals may each be replaced, independently of one another, by

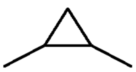, 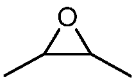, 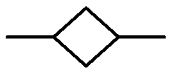, 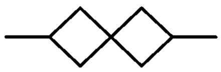,

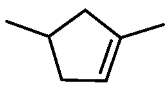, 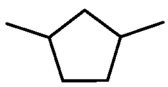,

-O-, -S-, -C≡C-, $-CF_2O-$, $-OCF_2-$, -CH=CH-, -OC-O-or -O-CO- in such a way that O atoms are not linked directly to one another, and in which, in addition, one or more H atoms may be replaced by halogen,
$A^3$ on each occurrence, independently of one another, denotes

a) 1,4-cyclohexenylene or 1,4-cyclohexylene radical, in which one or two non-adjacent $CH_2$ groups may be replaced by -O- or -S-,
b) a 1,4-phenylene radical, in which one or two CH groups may be replaced by N, or
c) a radical selected from the group consisting of spiro[3.3]heptane-2,6-diyl, 1,4-bicyclo[2.2.2]octylene, naphthalene-2,6-diyl, decahydronaphthalene-2,6-diyl, 1,2,3,4-tetrahydronaphthalene-2,6-diyl, phenanthrene-2,7-diyl and fluorene-2,7-diyl,

wherein the radicals a), b) and c) may be mono- or polysubstituted by halogen atoms,
n denotes 0, 1 or 2, preferably 0 or 1,
$Z^1$ on each occurrence independently of one another denotes -CO-O-, -O-CO-, $-CF_2O-$ , $-OCF_2-$, $-CH_2O-$, $-OCH_2-$, $-CH_2-$, $-CH_2CH_2-$, $-(CH_2)_4-$, $-CH=CH-CH_2O-$, $-C_2F_4-$, $-CH_2CF_2-$,$-CF_2CH_2$ -, -CF=CF-, -CH=CF-, -CF=CH-, -CH=CH-, -C□C- or a single bond,
$L^{11}$ and $L^{12}$ each, independently of one another, denote F, Cl, $CF_3$ or $CHF_2$, preferably H or F, most preferably

F, and
W denotes O or S.

**13.** The LC medium according to any one of Claims 1 to 12, **characterized in that** it additionally comprises one or more compounds of formula IV

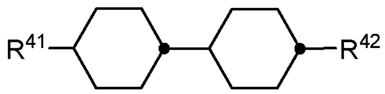

IV

in which

$R^{41}$ denotes an unsubstituted alkyl radical having 1 to 7 C atoms or an unsubstituted alkenyl radical having 2 to 7 C atoms, preferably an n-alkyl radical, particularly preferably having 2, 3, 4 or 5 C atoms, and
$R^{42}$ denotes an unsubstituted alkyl radical having 1 to 7 C atoms or an unsubstituted alkoxy radical having 1 to 6 C atoms, both preferably having 2 to 5 C atoms, an unsubstituted alkenyl radical having 2 to 7 C atoms, preferably having 2, 3 or 4 C atoms, more preferably a vinyl radical or a 1-propenyl radical and in particular a vinyl radical.

**14.** The LC medium according to any one of Claims 1 to 13, **characterized in that** it additionally comprises one or more compounds of formula V

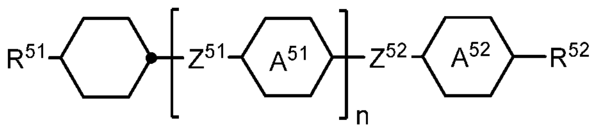

V

in which

$R^{51}$ and $R^{52}$ independently of one another, have one of the meanings given for $R^{41}$ and $R^{42}$ and preferably denote alkyl having 1 to 7 C atoms, preferably n-alkyl, particularly preferably n-alkyl having 1 to 5 C atoms, alkoxy having 1 to 7 C atoms, preferably n-alkoxy, particularly preferably n-alkoxy having 2 to 5 C atoms, alkoxyalkyl, alkenyl or alkenyloxy having 2 to 7 C atoms, preferably having 2 to 4 C atoms, preferably alkenyloxy,

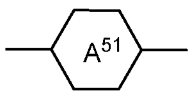 , 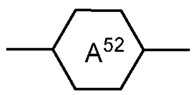 ,

identically or differently, denote

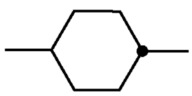 , 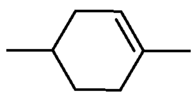 , 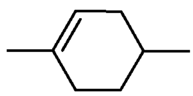 ,

, 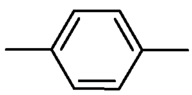 , 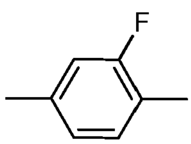 or 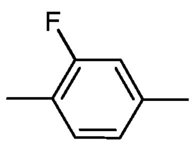

in which

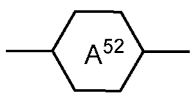

preferably denotes

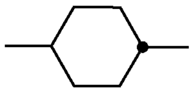 or, 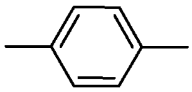 ,

$Z^{51}$ , $Z^{52}$ each, independently of one another, denote $-CH_2-CH_2-$, $-CH_2-O-$,-CH=CH-, -C=C-, -COO- or a single bond, preferably $-CH_2-CH_2-$, $-CH_2-O-$ or a single bond and particularly preferably a single bond, and n is 1 or 2.

**15.** The LC medium according to any one of Claims 1 to 14, **characterized in that** it additionally comprises one or more additives selected from the group consisting of stabilizers, chiral dopants, polymerization initiators and self alignment additives.

**16.** A process of preparing an LC medium according to one or more of Claims 1 to 15, comprising the steps of mixing one or more one or more polymerizable compounds of formula I as defined in one or more of Claims 1 to 6 with one or more compounds of formula II, III, IV and/or V as defined in one or more of Claims 1 or 9 to 12, and optionally with one or more additional polymerizable compounds as defined in one or more of Claims 7 to 10, and optionally with further liquid-crystalline compounds and/or additives, and optionally polymerizing the polymerizable compounds.

**17.** An LC display comprising an LC medium as defined in one or more of Claims 1 to 15.

**18.** The LC display of Claim 17, which is a PS-VA, PS-IPS, PS-FFS, PS-UB-FFS or SA-VA display.

**19.** The LC display of Claim 17 or 18, **characterized in that** it comprises two substrates, at least one of which is transparent to light, an electrode provided on each substrate or two electrodes provided on only one of the substrates, and located between the substrates a layer of an LC medium according to one or more of Claims 1 to 15, wherein the polymerizable compounds are polymerized between the substrates of the display by UV photopolymerization.

**20.** A process for the production of an LC display according to Claim 19, comprising the steps of providing an LC medium according to one or more of Claims 1 to 15 between the substrates of the display, and polymerizing the polymerizable compounds by irradiation with UV light, preferably while a voltage is applied to the electrodes of the display.

**21.** The process according to Claim 20, **characterized in that** the UV light has a wavelength in the range from 350 to <370 nm.

**22.** The process according to Claim 20 or 21, **characterized in that** irradiation with UV light is carried out using an UV-LED lamp.

## Patentansprüche

**1.** FK-Medium, **dadurch gekennzeichnet, dass** es eine oder mehrere polymerisierbare Verbindungen der Formel I

$$P\text{-}Sp\text{-}A^a\text{-}(Z^a\text{-}A^b)_z\text{-}R^b \qquad I$$

enthält, bei der die einzelnen Reste, unabhängig voneinander und bei jedem Auftreten gleich oder verschieden, die folgenden Bedeutungen besitzen

$R^b$ P-Sp- oder R,
R F, Cl, -CN oder geradkettiges, verzweigtes oder cyclisches Alkyl mit 1 bis 25 C-Atomen, bei dem gegebenenfalls eine oder mehrere nicht benachbarte $CH_2$-Gruppen so durch -O-, -S-, -CO-, -CO-O-, -O-CO-, -O-CO-O-, $CR^0=CR^{00}$-, -C≡C-,

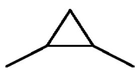 , 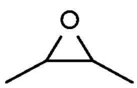 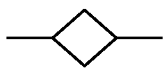 , 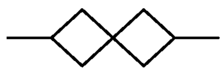 ,

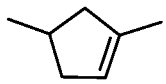 oder 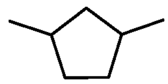

ersetzt sind, dass O- und/oder S-Atome nicht direkt miteinander verbunden sind, und bei dem gegebenenfalls ein oder mehrere H-Atome jeweils durch F oder Cl oder P-Sp- ersetzt sind,
P eine polymerisierbare Gruppe,
Sp eine Spacergruppe, die gegebenenfalls durch P substituiert ist, oder eine Einfachbindung,
$A^a$, $A^b$ eine alicyclische, heterocyclische, aromatische oder hetero-aromatische Gruppe mit 4 bis 20 Ringatomen, die mono-cyclisch oder polycyclisch ist und die gegebenenfalls durch eine oder mehrere Gruppen A, L oder P-Sp- substituiert ist,
$Z^a$ -O-, -S-, -CO-, -CO-O-, -O-CO-, -O-CO-O-, $-OCH_2-$, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -CH=CF-, -CF=CH-, -C≡C-, -CH=CH-CO-O-, -O-CO-CH=CH-, $-CH_2-CH_2-CO-O-$, $-O-CO-CH_2-CH_2-$, $-CR^0R^{00}-$ oder eine Einfachbindung,
R°, $R^{00}$ H oder Alkyl mit 1 bis 12 C-Atomen,
A Alkyl mit 2 bis 12, vorzugsweise 2 bis 8, C-Atomen, bei dem eine oder mehrere, vorzugsweise nicht endständige, $CH_2$-Gruppen so durch S ersetzt sind, dass S-Atome nicht direkt miteinander verbunden sind,
L F, Cl, -CN, P-Sp- oder geradkettiges, verzweigtes oder cyclisches Alkyl mit 1 bis 25 C-Atomen, bei dem gegebenenfalls eine oder mehrere nicht benachbarte $CH_2$-Gruppen so durch -O-, -S-, -CO-, -CO-O-, -O-CO-, -O-CO-O-, $CR^0=CR^{00}-$, -C≡C-,

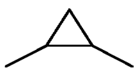, 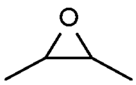, 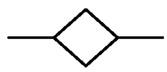, 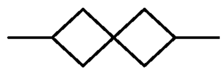,

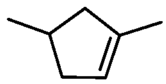 oder 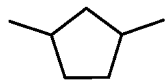

ersetzt sind, dass O- und/oder S-Atome nicht direkt miteinander verbunden sind, und bei dem gegebenenfalls ein oder mehrere H-Atome jeweils durch P-Sp-, F oder Cl ersetzt sind,
z 0, 1, 2, 3 oder 4,
n1 1, 2, 3 oder 4,

bei dem die Verbindungen der Formel I mindestens eine Gruppe $A^a$ oder $A^b$ enthalten, die durch mindestens eine Gruppe A substituiert ist,
und ferner eine oder mehrere Verbindungen der Formel II

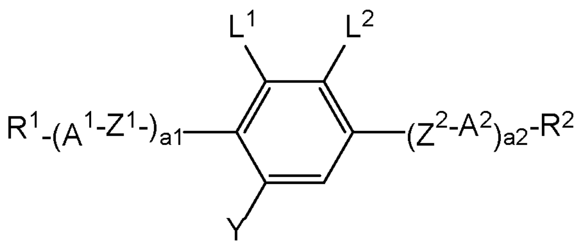

II

enthält, bei der die einzelnen Reste, unabhängig voneinander und bei jedem Auftreten gleich oder verschieden, die folgenden Bedeutungen besitzen

$R^1$, $R^2$ geradkettiges, verzweigtes oder cyclisches Alkyl mit 1 bis 25 C-Atomen, bei dem gegebenenfalls eine oder mehrere nicht benachbarte $CH_2$-Gruppen so durch -O-, -S-, -CO-, -CO-O-, -O-CO-, -O-CO-O-, $CR^0=CR^{00}-$, -C≡C-,

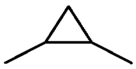, 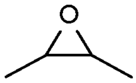, 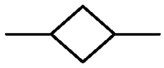, 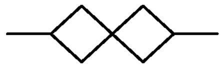,

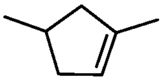 oder 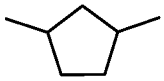

ersetzt sind, dass O- und/oder S-Atome nicht direkt miteinander verbunden sind, und bei dem gegebenenfalls ein oder mehrere H-Atome jeweils durch F oder Cl ersetzt sind,

$A^1$, $A^2$ eine Gruppe, die ausgewählt ist aus den folgenden Formeln

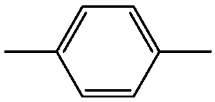
A1

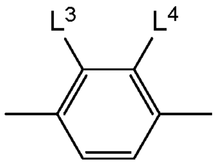
A2

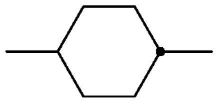
A3

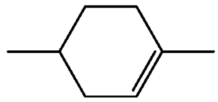
A4

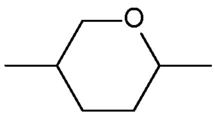
A5

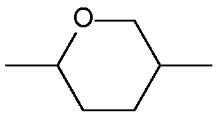
A6

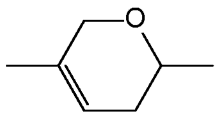
A7

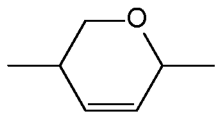
A8

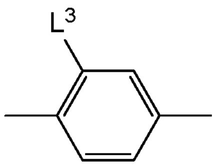
A9

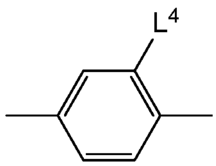
A10

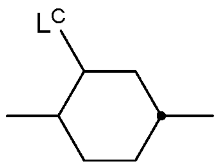
A11

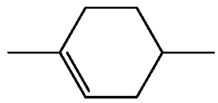
A12

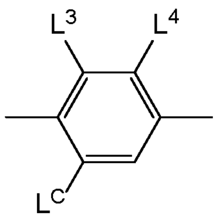
A13

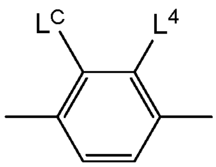
A14

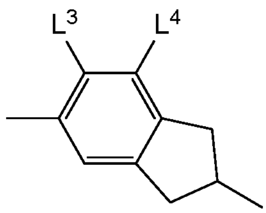
A15

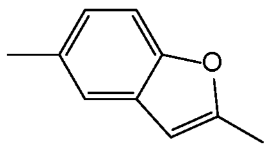
A16

bei der die einzelnen Reste, unabhängig voneinander und bei jedem Auftreten gleich oder verschieden, die folgenden Bedeutungen besitzen

$Z^1$, $Z^2$ $-CH_2CH_2-$, -CH=CH-, $-CF_2O-$, $-OCF_2-$, $-CH_2O-$, $-OCH_2-$, -CO-O-, -O-CO-, $-C_2F_4-$, -CF=CF-, $-CH=CH-CH_2O-$ oder eine Einfachbindung,
$L^1$, $L^2$, $L^3$, $L^4$ F, Cl, $OCF_3$, $CF_3$, $CH_3$, $CH_2F$ oder $CHF_2$,
Y H, F, Cl, $CF_3$, $CHF_2$ oder $CH_3$,
$L^C$ $CH_3$ oder $OCH_3$,
a1 1 oder 2,
a2 0 oder 1.

2. FK-Medium nach Anspruch 1, **dadurch gekennzeichnet, dass** die Gruppe A in Formel I Thioalkyl mit 1 bis 7 C-Atomen bedeutet.

**3.** FK-Medium nach Anspruch 1 oder 2, **dadurch gekennzeichnet, dass** die Gruppe A in Formel I $SCH_3$ bedeutet.

**4.** Verbindung nach irgendeinem der Ansprüche 1 bis 3, **dadurch gekennzeichnet, dass** die Verbindungen der Formel I ausgewählt sind aus den folgenden Unterformeln:

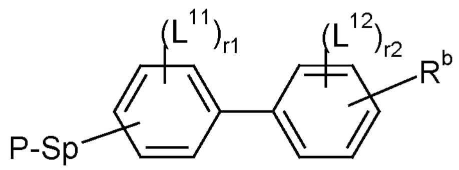

I1

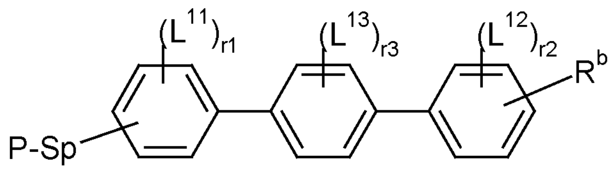

I2

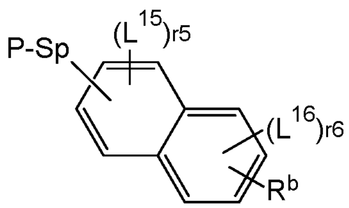

I3

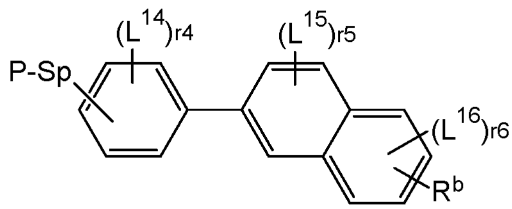

I4a

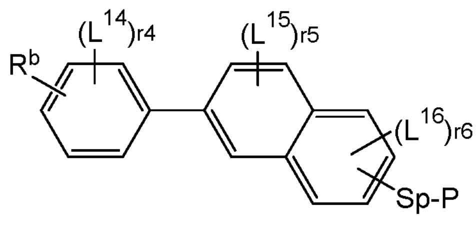

I4b

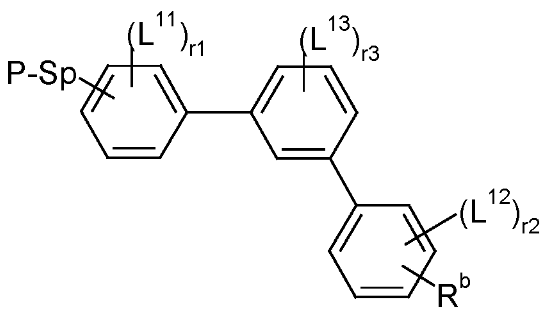

I5

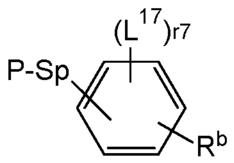

I6

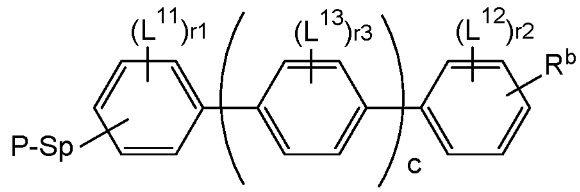

I12

bei denen die einzelnen Reste, unabhängig voneinander, und bei jedem Auftreten gleich oder verschieden, die folgenden Bedeutungen besitzen

A, P, Sp, $R^b$ eine der in Anspruch 1, 2 oder 3 genannten Bedeutungen,
$L^{11}$ bis $L^{17}$ L oder A,
r1, r2, r3, r4 0, 1, 2, 3 oder 4, bei denen in Formel I1, I2 und I5 r1+r2+r3 $\geq$1 und in Formel I12 r1+r2+r3 $\geq$,
r5, r6, 0, 1, 2 oder 3, bei denen in Formel I3 r5+r6 $\geq$1 und in Formel I4a und I4b r4+r5+r6$\geq$1,
r7 1, 2, 3 oder 4,
c 0, 1 oder 2,

bei denen die Verbindungen mindestens eine Gruppe $L^{11}$ bis $L^{17}$ enthalten, die A ist.

**5.** FK-Medium nach irgendeinem der Ansprüche 1 bis 4, **dadurch gekennzeichnet, dass** die Verbindungen der Formel I ausgewählt sind aus den folgenden Unterformeln:

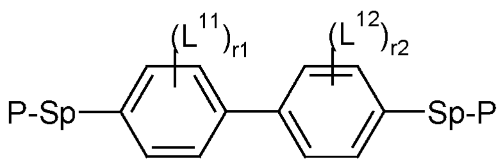

I1A

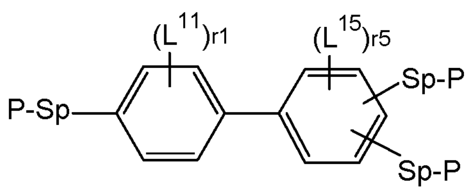

I1B

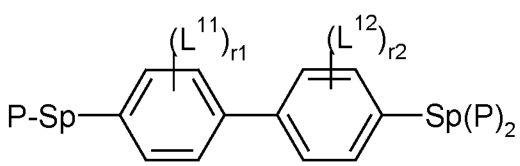

I1C

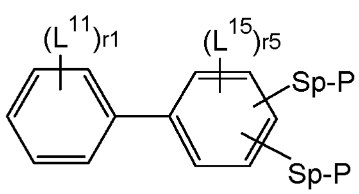

I1D

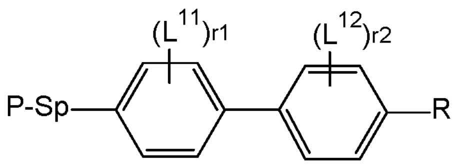
I1E

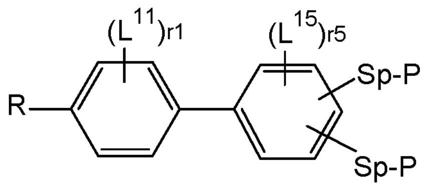
I1F

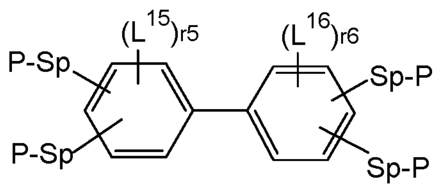
I1G

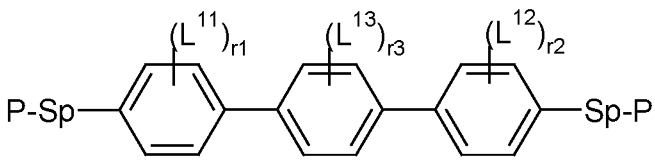
I2A

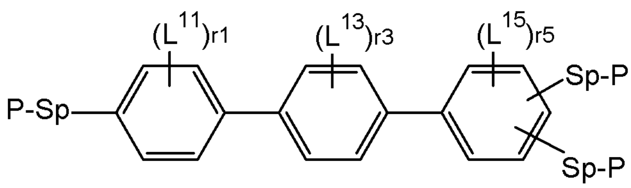
I2B

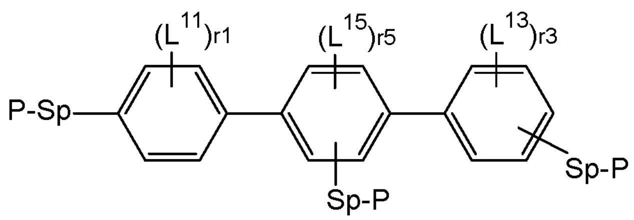
I2C

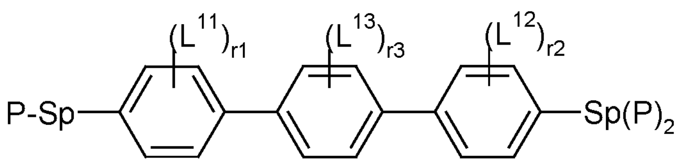
I2D

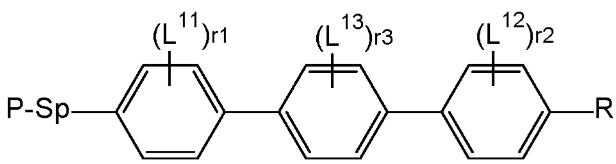
I2E

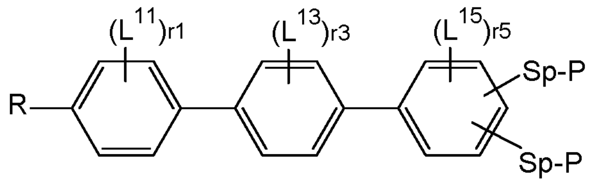
I2F

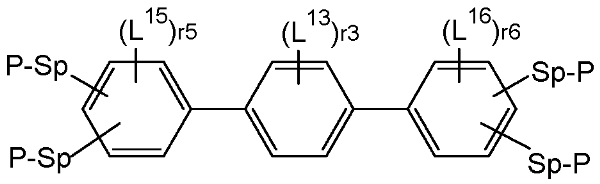
I2G

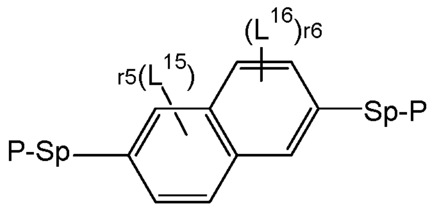
I3A

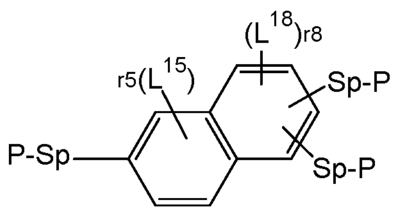
I3B

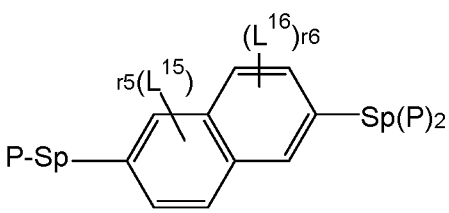
I3C

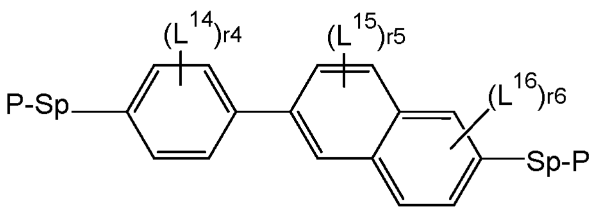
I4A

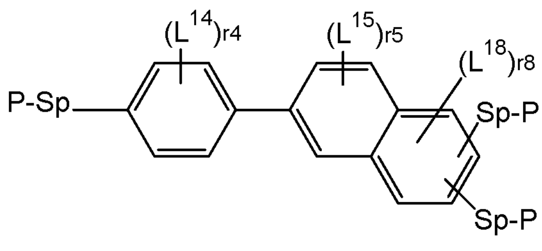
I4B

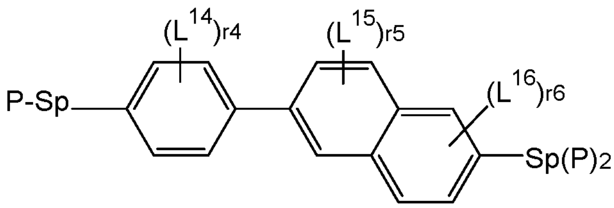

I4C

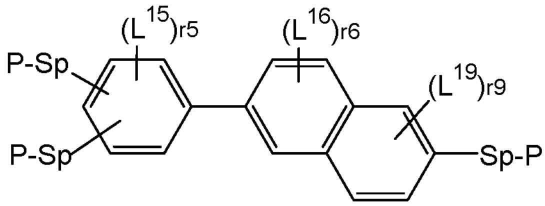

I4D

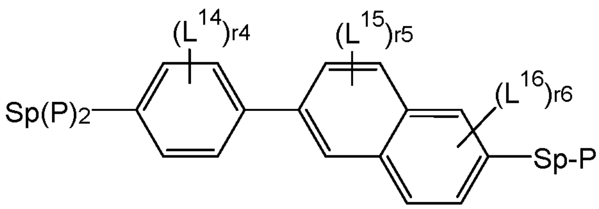

I4E

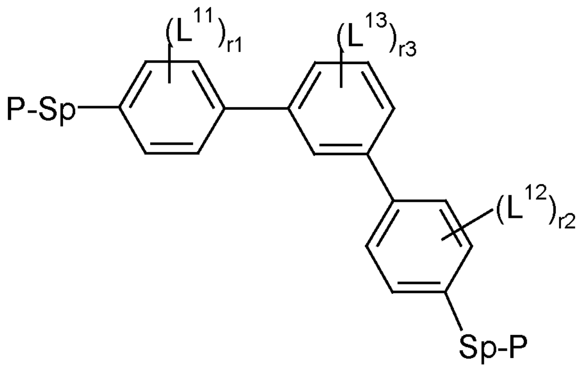

I5A

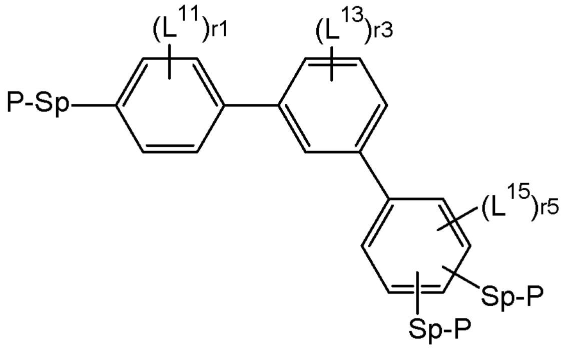

I5B

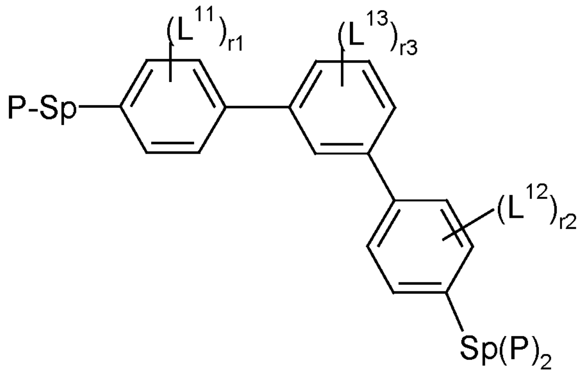

I5C

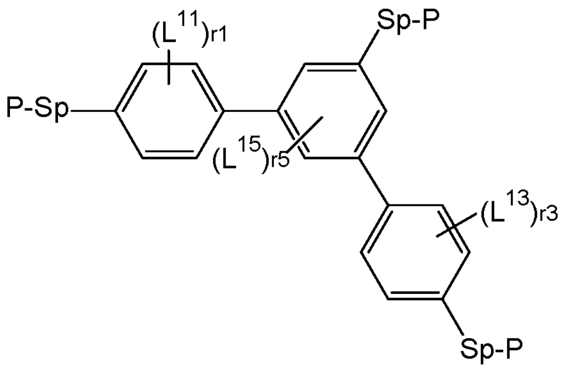

I5D

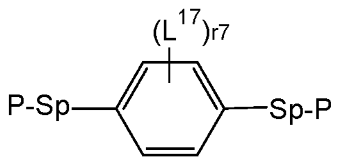

I6A

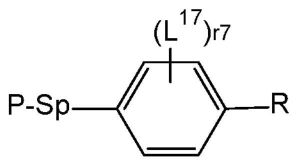

I6B

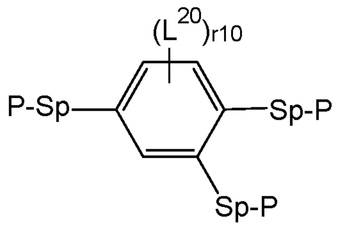

I6C

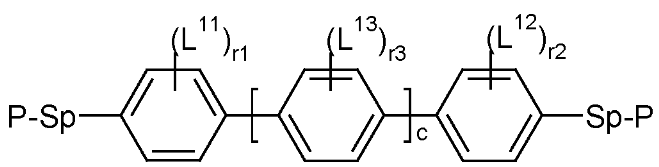

I12A

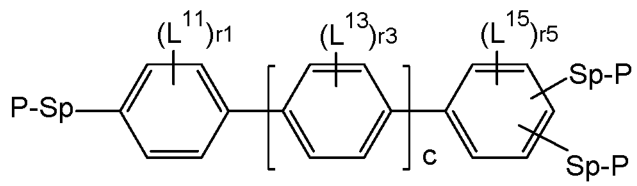

I12B

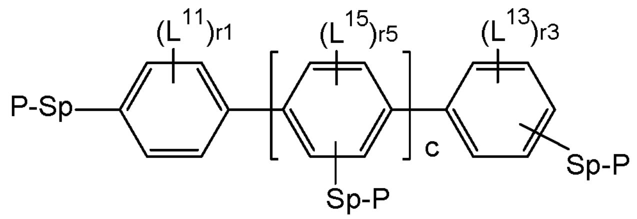

I12C

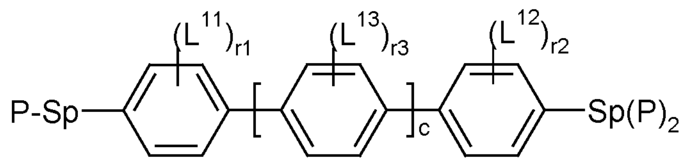

I12D

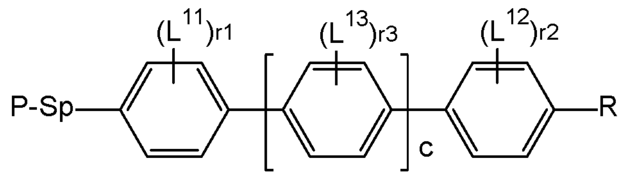

I12E

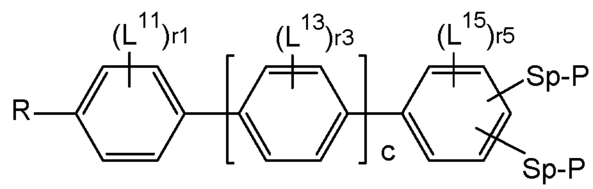

I12F

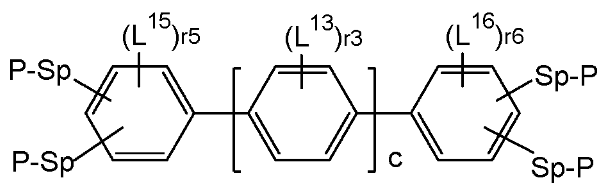

I12G

bei denen

R, P, Sp, $L^{11-17}$ und r1-r7 die in irgendeinem der Ansprüche 1 bis 5 genannten Bedeutungen besitzen,
$L^{18}$, $L^{19}$ und $L^{20}$ eine der für $L^{11}$ genannten Bedeutungen besitzen,
r8 0, 1 oder 2 ist,
r9 0, 1, 2 oder 3 ist,
r10 1, 2 oder 3 ist,
c 0, 1 oder 2 ist,
$Sp(P)_2$ eine Spacergruppe Sp bedeutet, die durch zwei polymerisierbare Gruppen P in gleichen oder unterschiedlichen Positionen substituiert ist,
und bei denen
in den Formeln 11A, 11C und I1E r1+r2 ≥1,
in der Formel I1B, I1D und I1F r1+r5 ≥1,
in der Formel I1G, I3A und I3C r5+r6 ≥1,
in den Formeln I2A, 120, I2E, I5A und I5C r1+r2+r3 ≥1,

in den Formeln I2B, I2C, I2F, I5B und 150 r1+r3+r5 ≥1,
in der Formel I2G r3+r5+r6 ≥1,
in der Formel I4A, I4C und I4E r4+r5+r6 ≥1,
in der Formel I4D r5+r6+r9 ≥1,
in der Formel I3B r5+r8 ≥1,
in der Formel I4B r4+r5+r8 ≥1,
in den Formeln 112A, 112D und 112E r1+r2+r3 ≥1,
in den Formeln I12B, I12C und I12F r1+r3+r5 ≥1,
in der Formel 112G r3+r5+r6 ≥1,
und bei denen die Verbindungen mindestens eine Gruppe $L^{11}$ bis $L^{20}$ enthalten, die A bedeutet.

6. FK-Medium nach irgendeinem der Ansprüche 1 bis 5, **dadurch gekennzeichnet, dass** die Verbindungen der Formel I ausgewählt sind aus den folgenden Unterformeln:

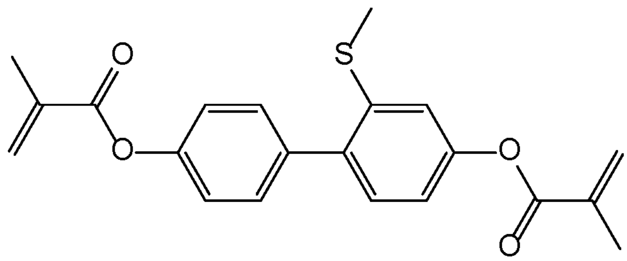

I1A-1-1a

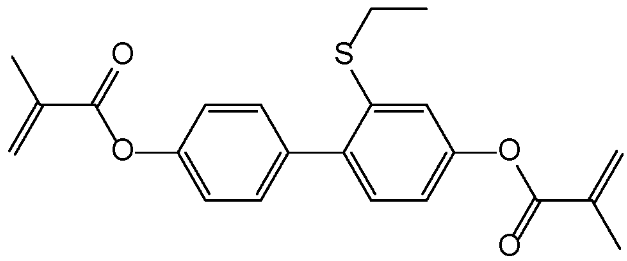

I1A-1-1b

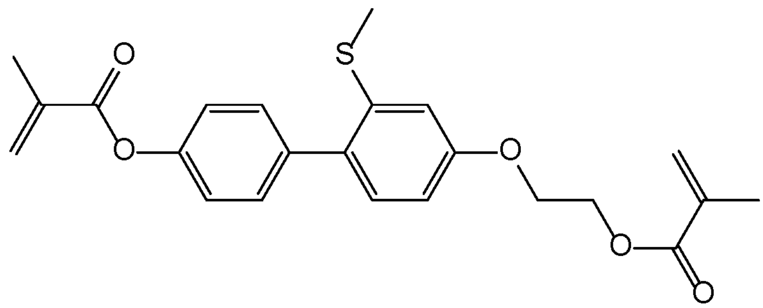

I1A-1-1c

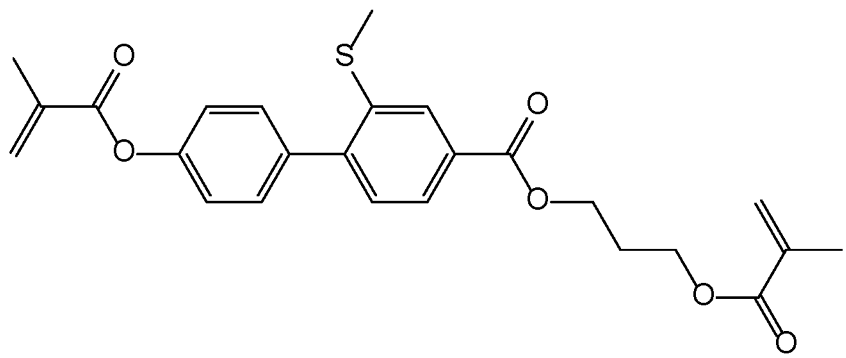

I1A-1-1d

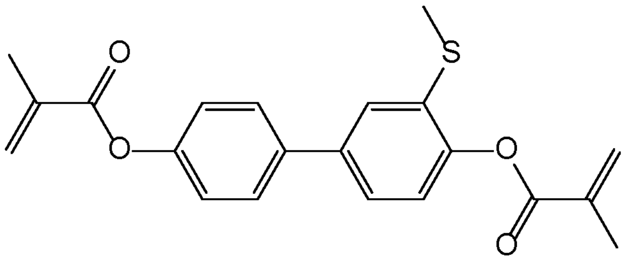

I1A-1-2a

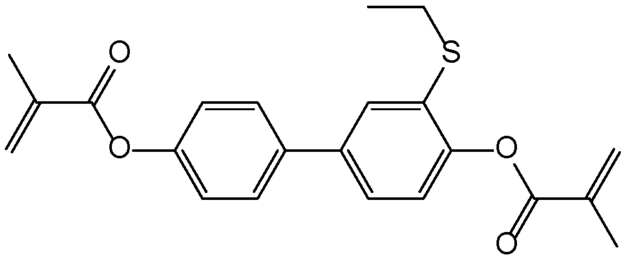

I1A-1-2b

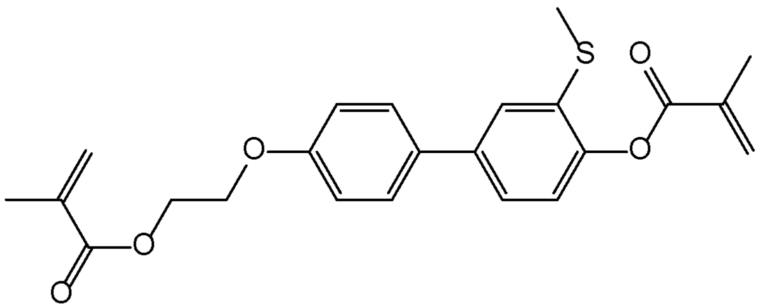

I1A-1-2c

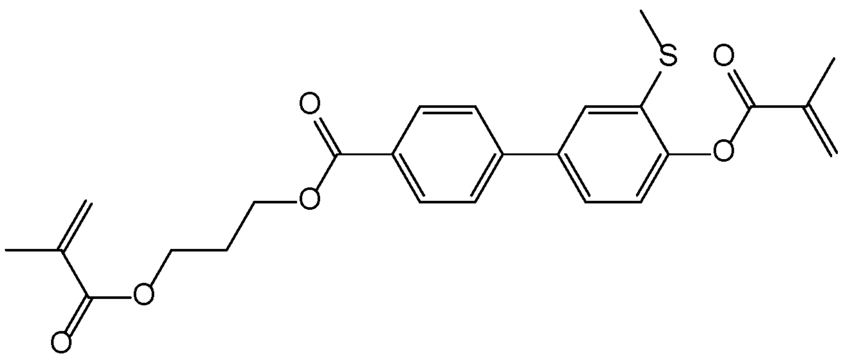

I1A-1-2d

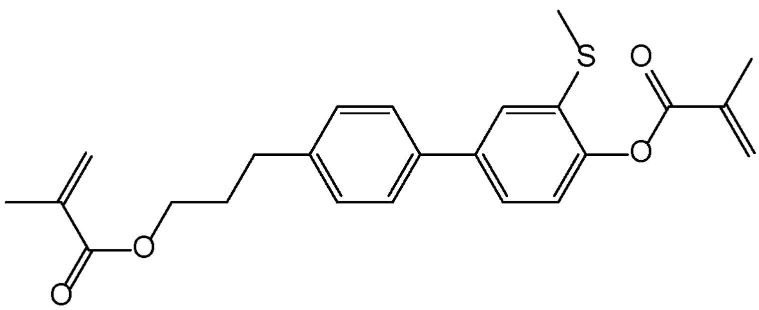

I1A-1-2e

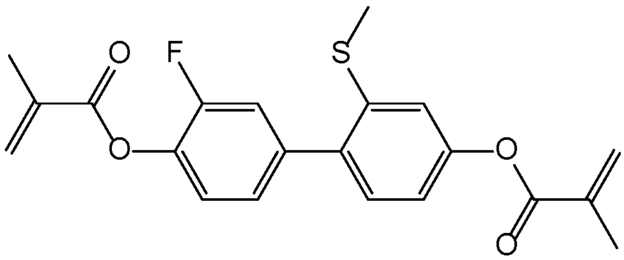

I1A-2-1a

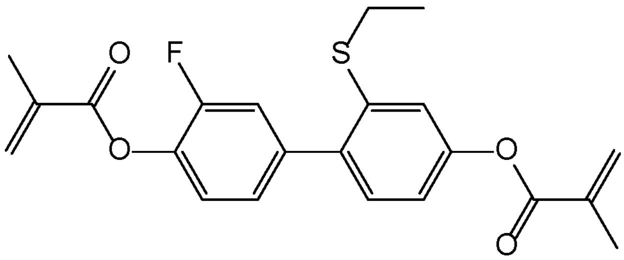

I1A-2-1b

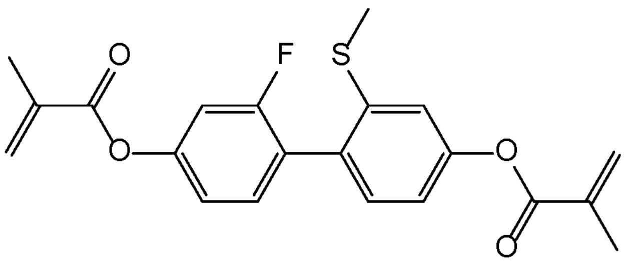

I1A-2-2a

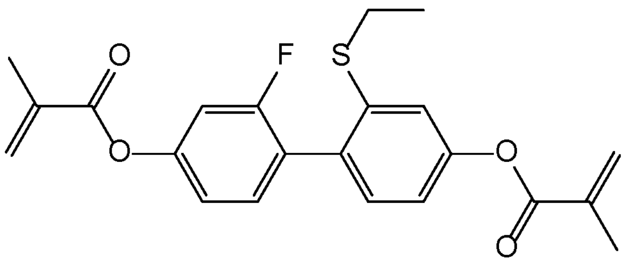

I1A-2-2b

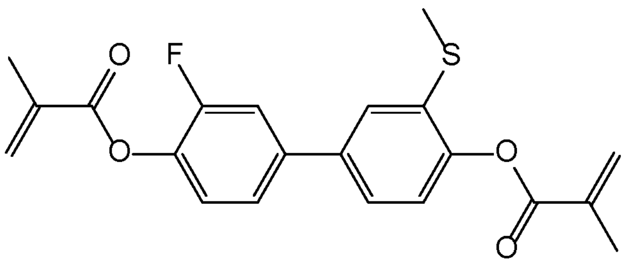

I1A-2-3a

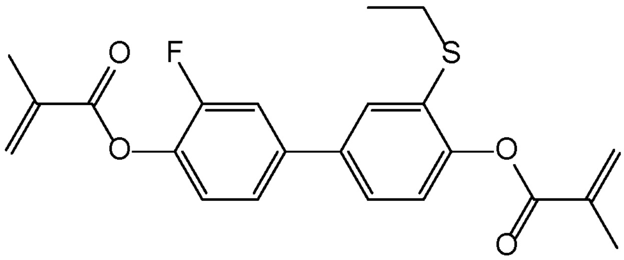

I1A-2-3b

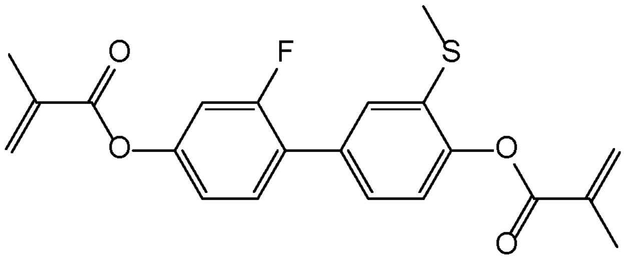

I1A-2-4a

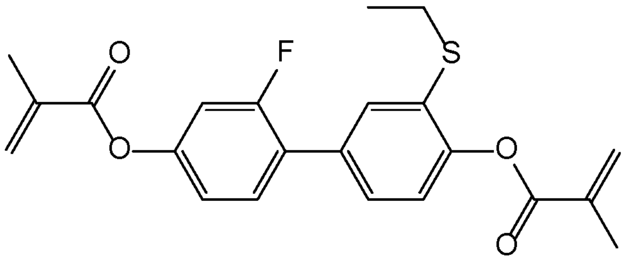

I1A-2-4b

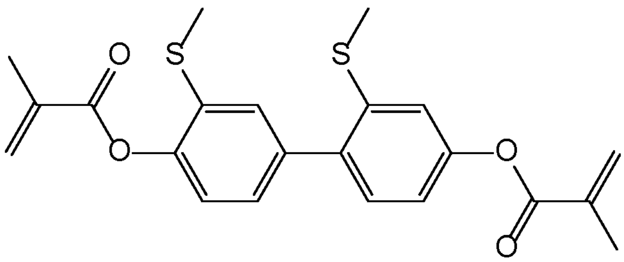

I1A-4-1a

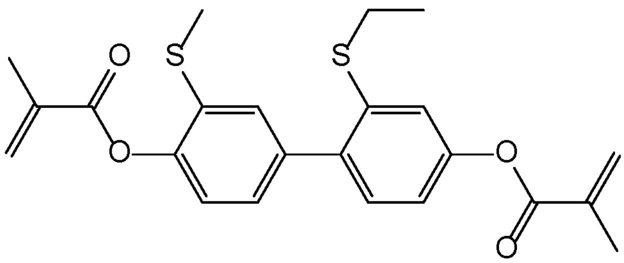

I1A-4-1b

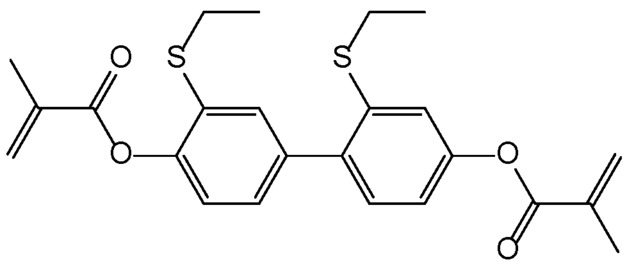

I1A-4-1c

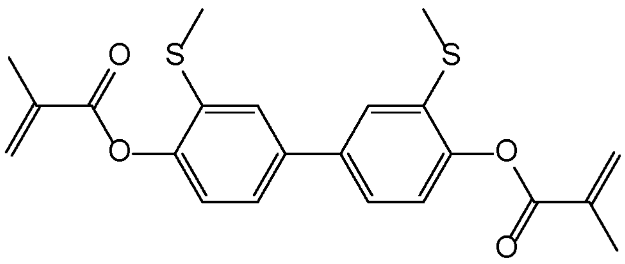

I1A-4-2a

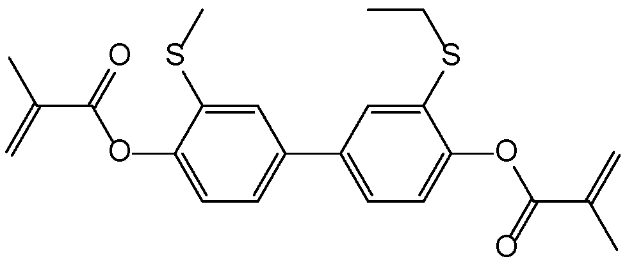

I1A-4-2b

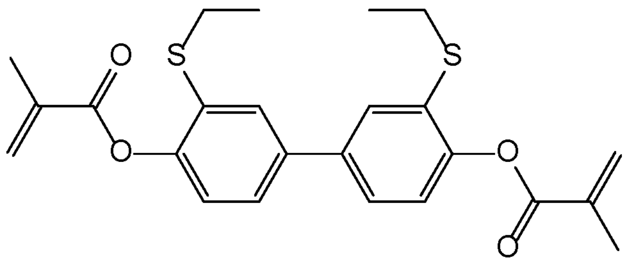

I1A-4-2c

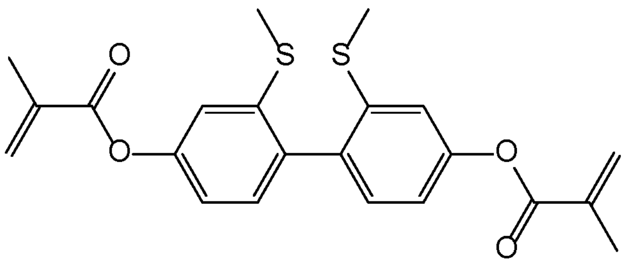

I1A-4-3a

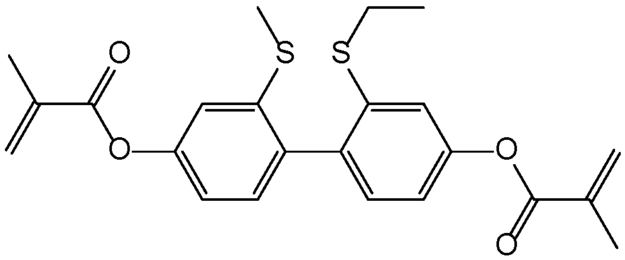

I1A-4-3b

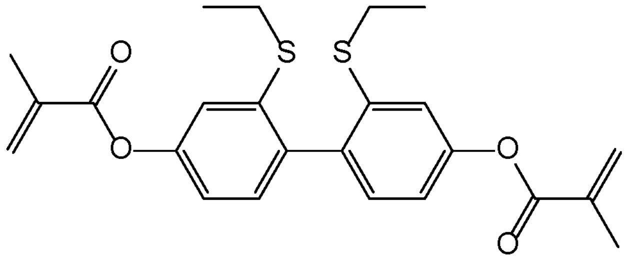

I1A-4-3c

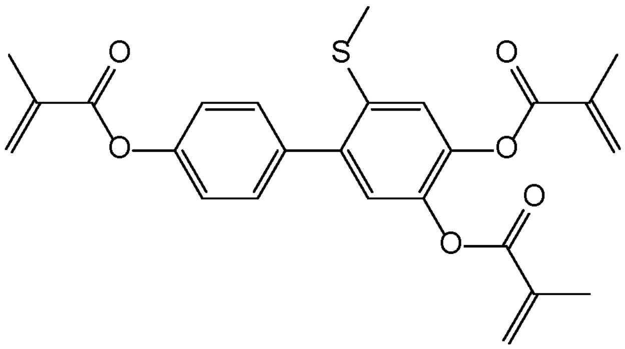

I1B-1-1a

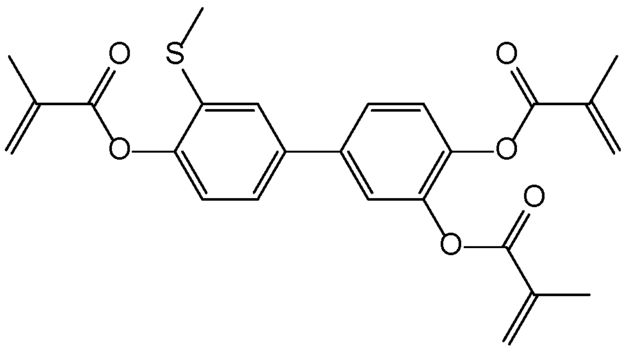

I1B-2-1a

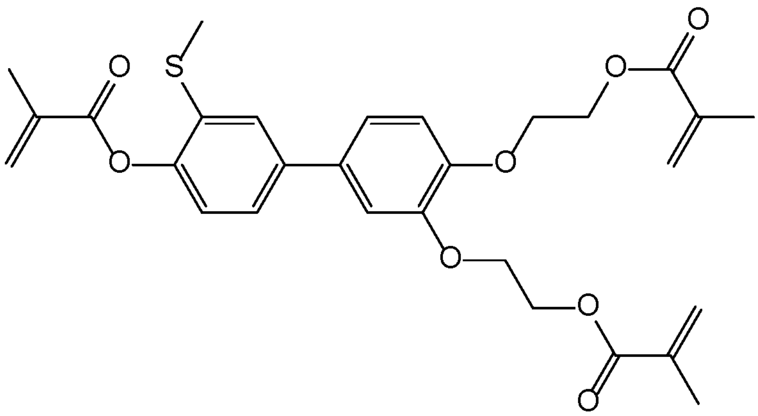

I1B-2-1b

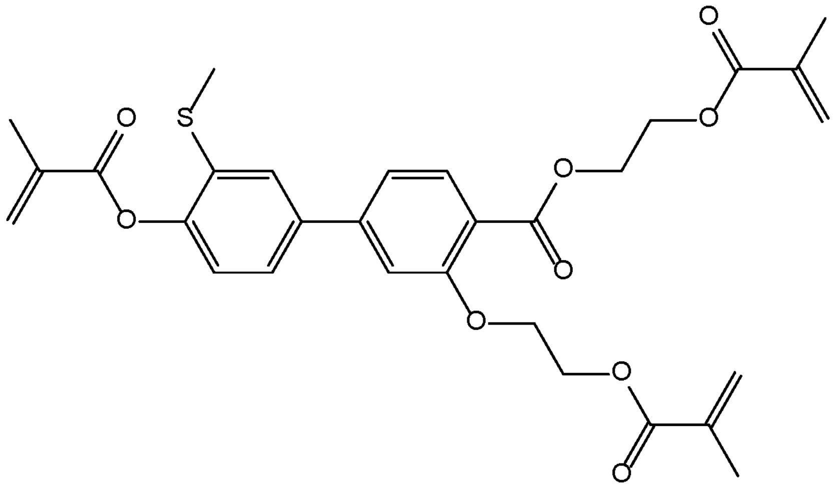

I1B-2-1c

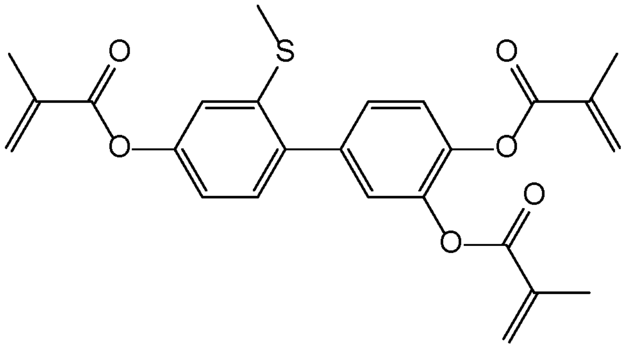

I1B-2-2a

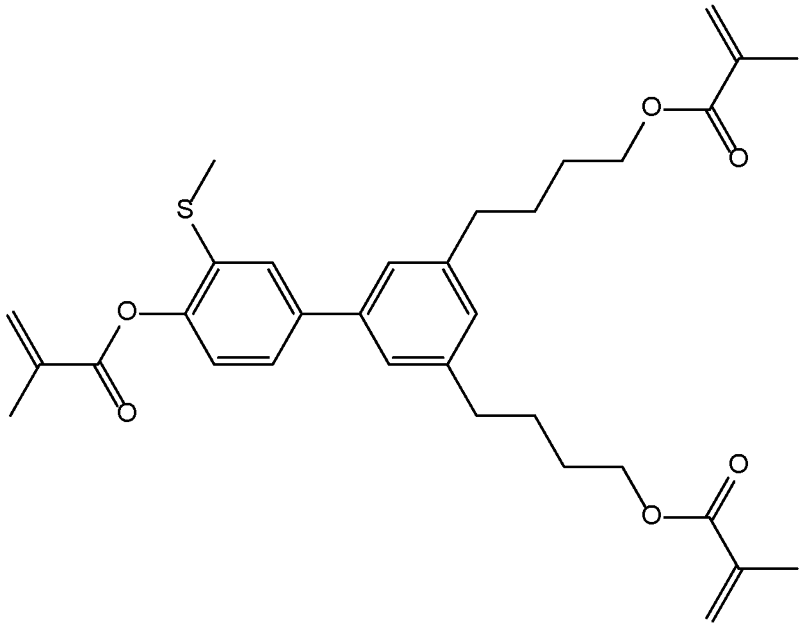

I1B-2-3a

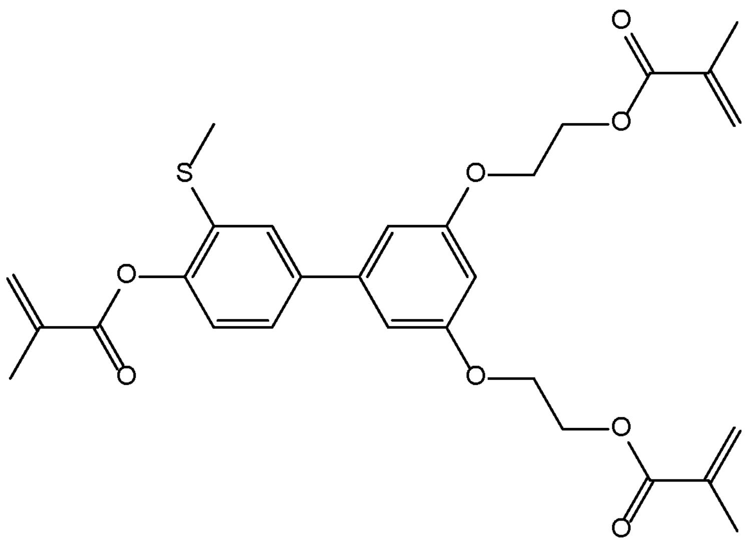

I1B-2-3b

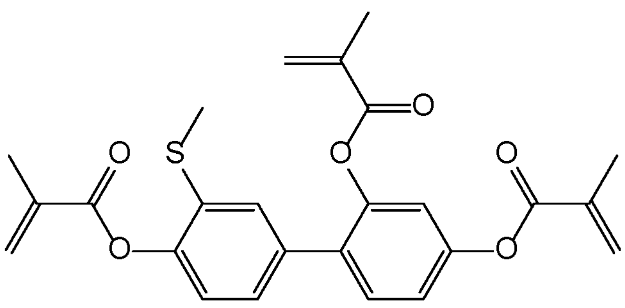

I1B-2-5a

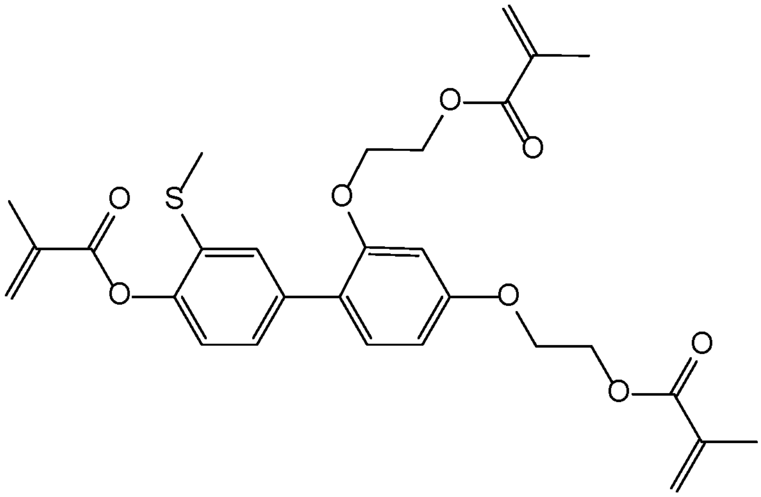

I1B-2-5b

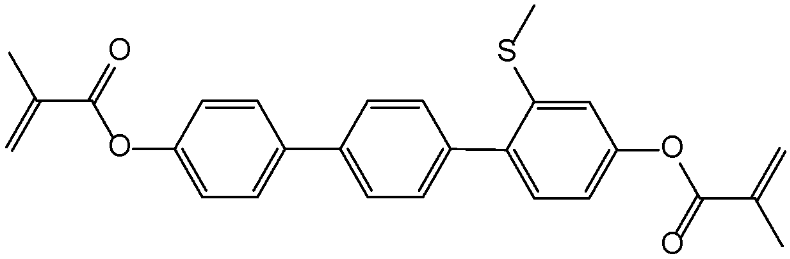

I2A-1-1a

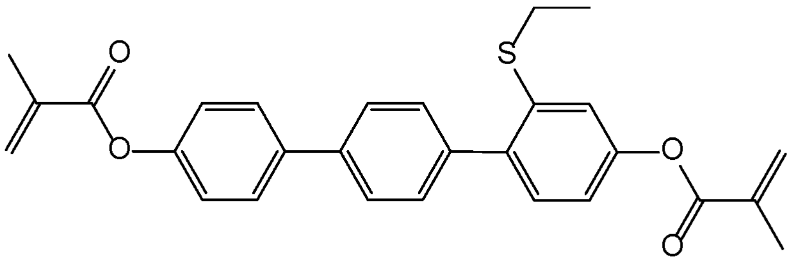

I2A-1-1b

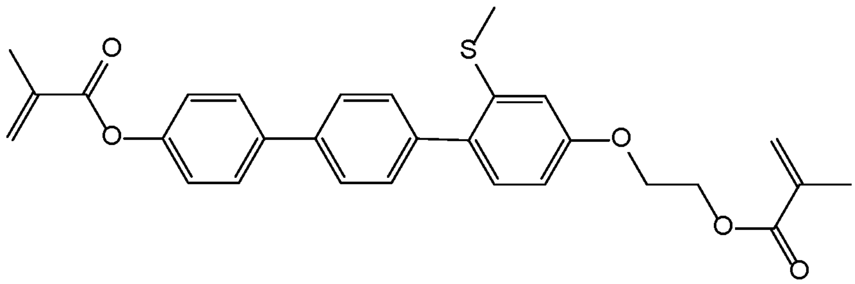

I2A-1-1c

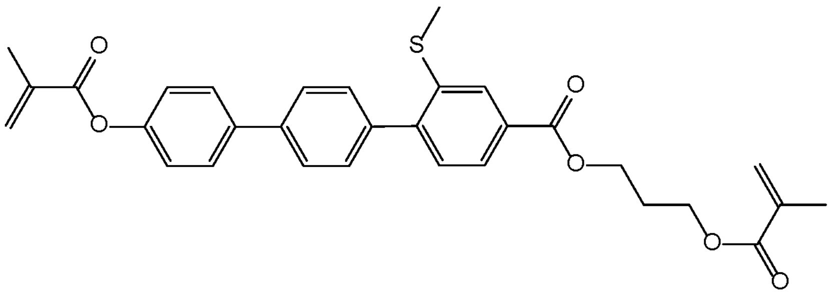

I2A-1-1d

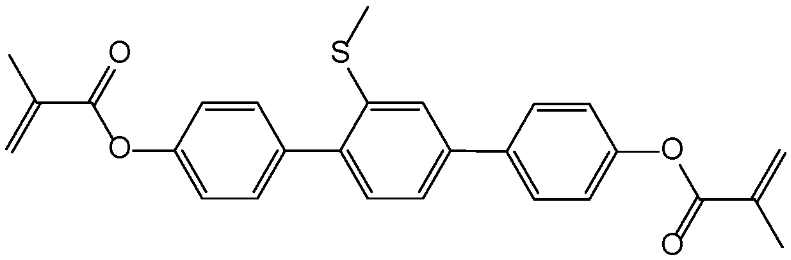

I2A-2-1a

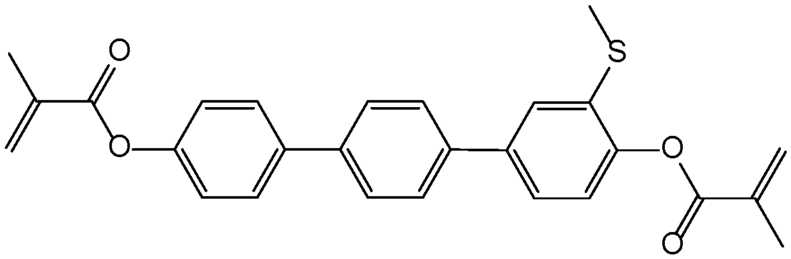

I2A-2-2a

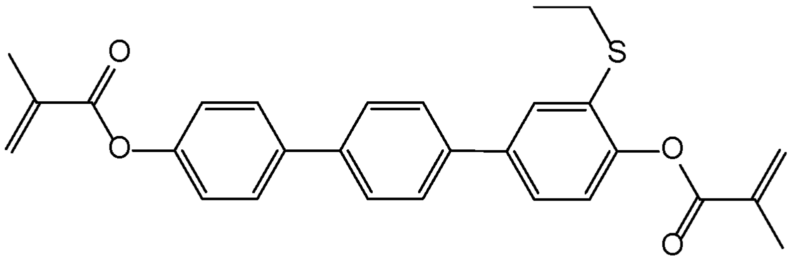

I2A-2-2b

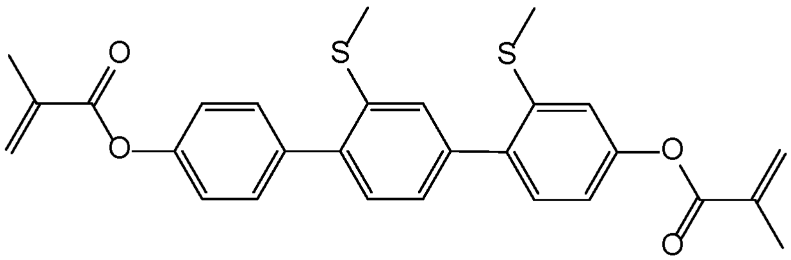

I2A-3-1a

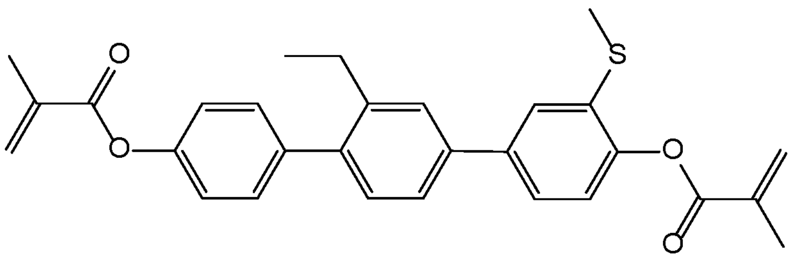

I2A-3-3a

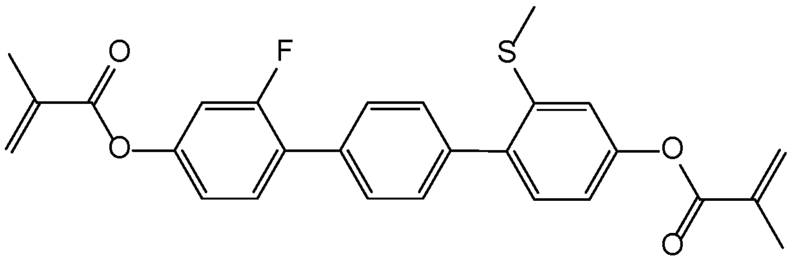

I2A-5-3a

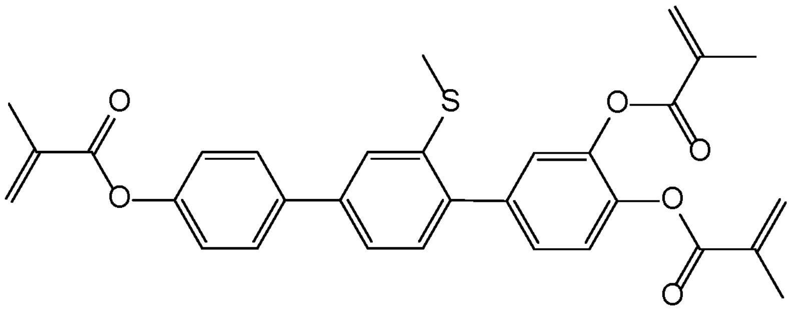

I2B-1-1a

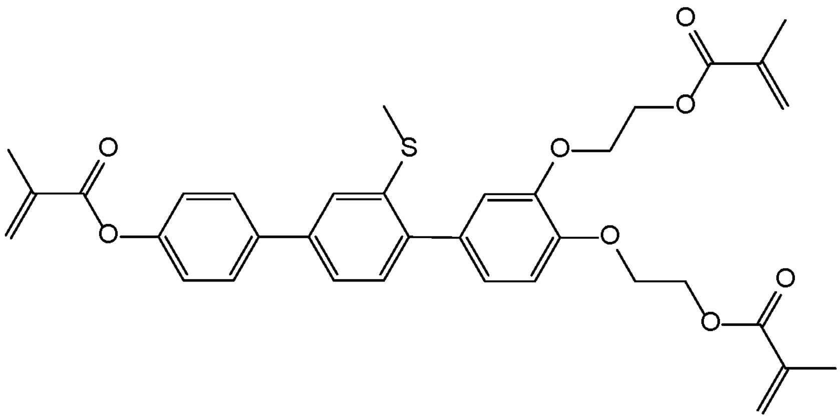

I2B-1-1b

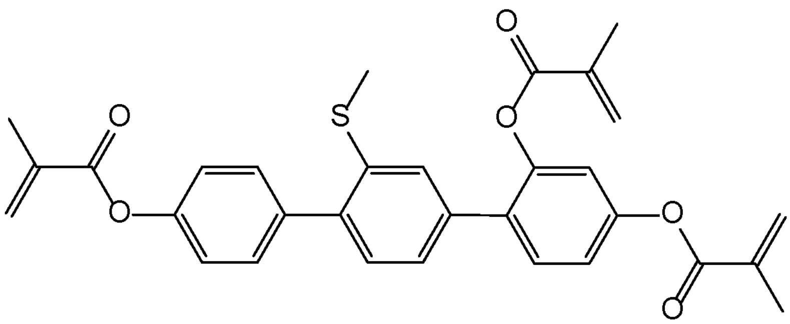

I2B-1-6a

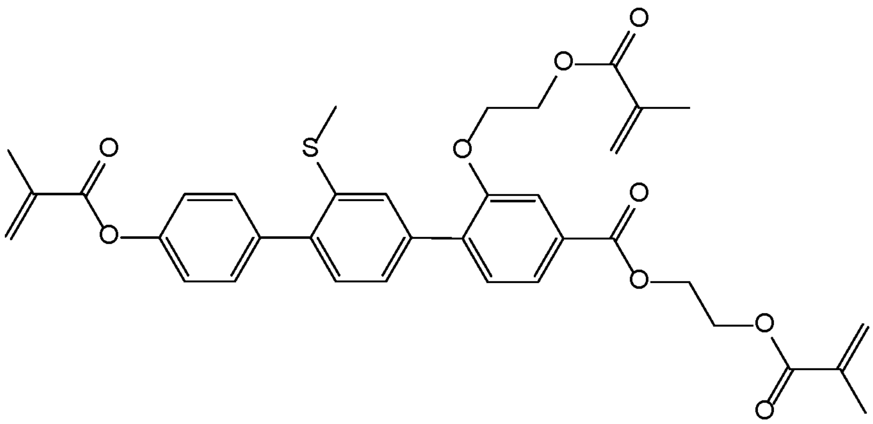

I2B-1-6b

7. FK-Medium nach einem oder mehreren der Ansprüche 1 bis 6, **dadurch gekennzeichnet, dass** es eine oder mehrere zusätzliche polymerisierbare Verbindungen enthält, die ausgewählt sind aus den folgenden Formeln:

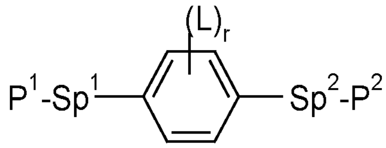

M1

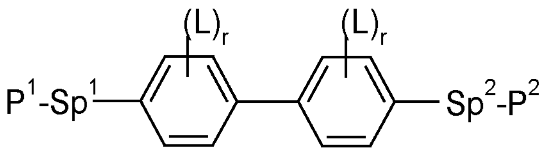

M2

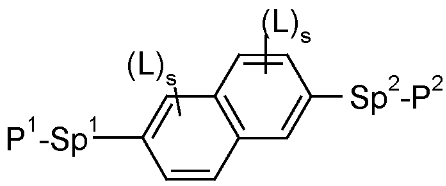

M3

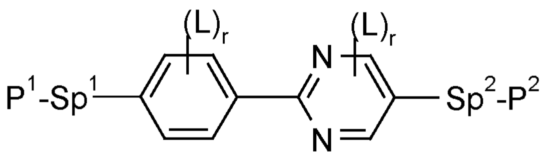

M4

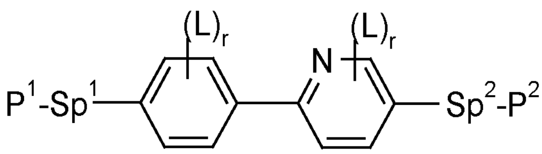

M5

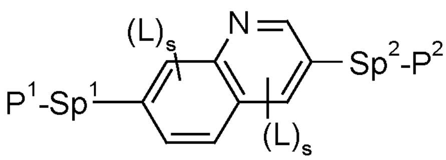

M6

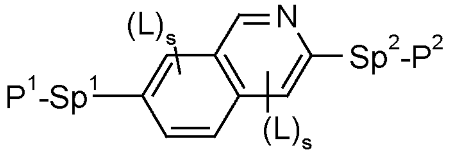
M7

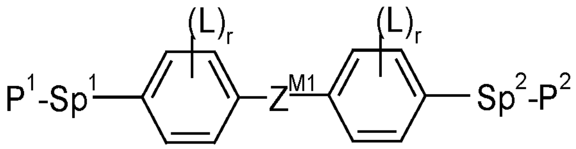
M8

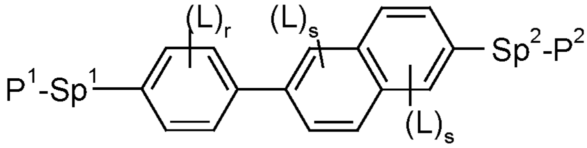
M9

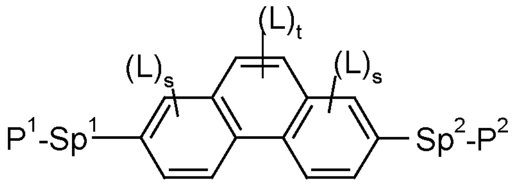
M10

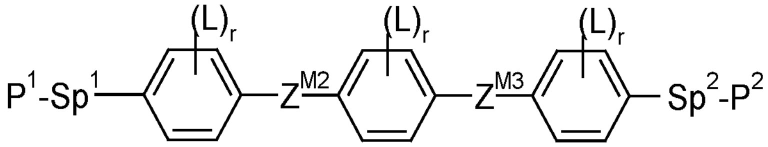
M11

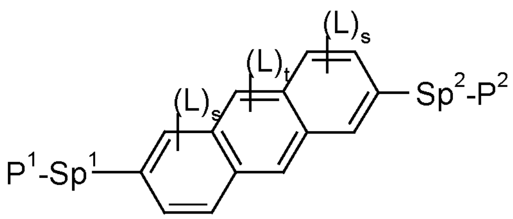
M12

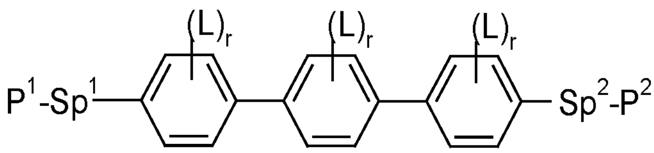
M13

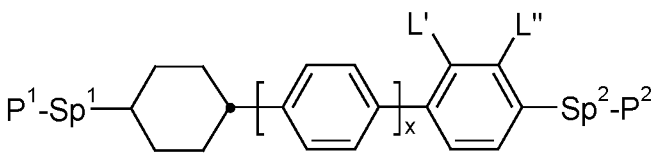
M14

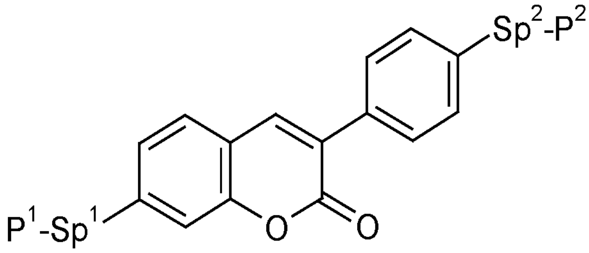
M15

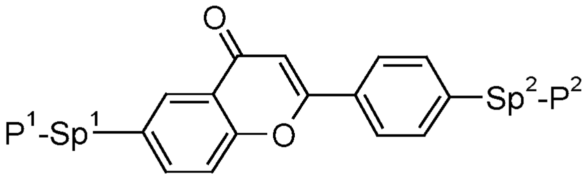
M16

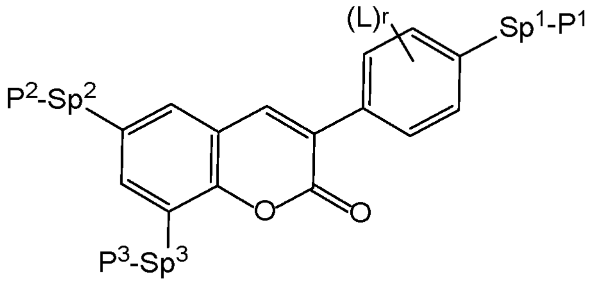
M17

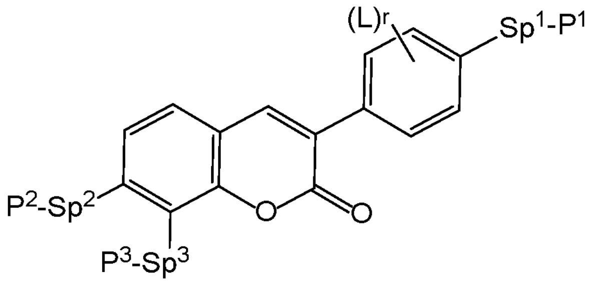
M18

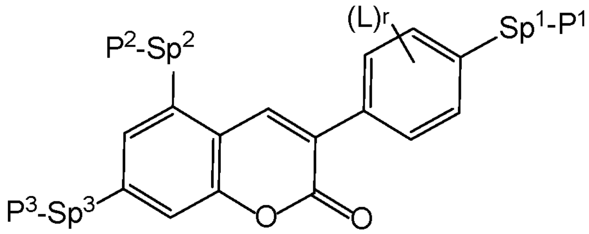
M19

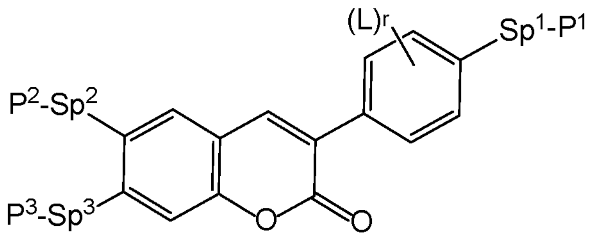
M20

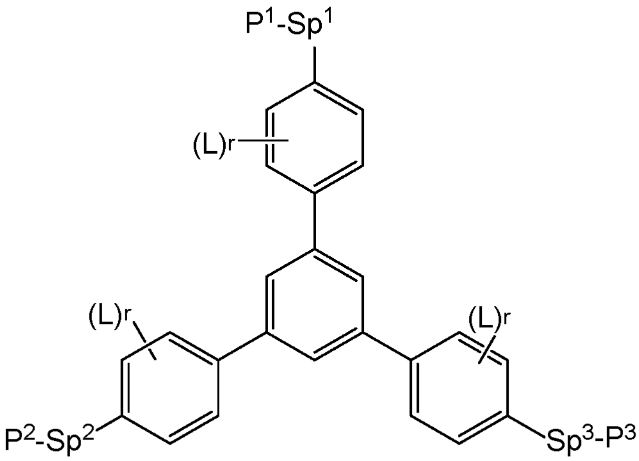

M21

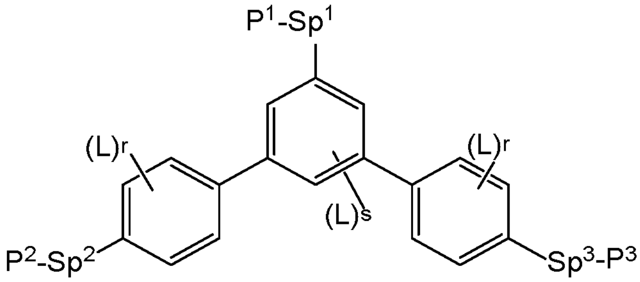

M22

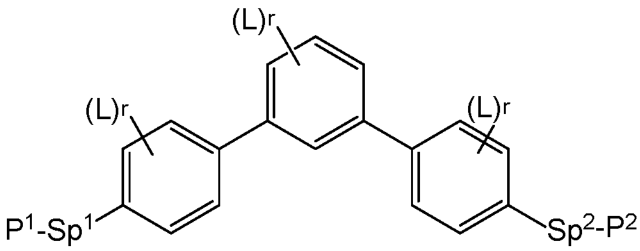

M23

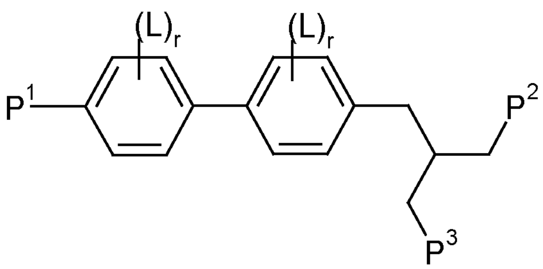

M24

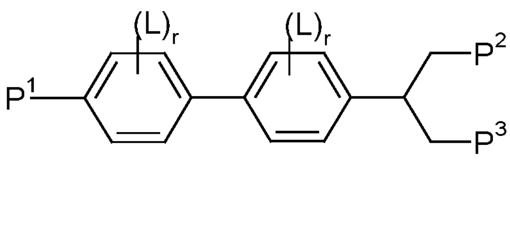

M25

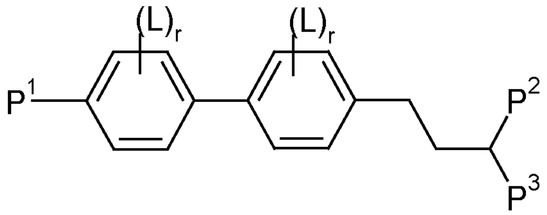

M26

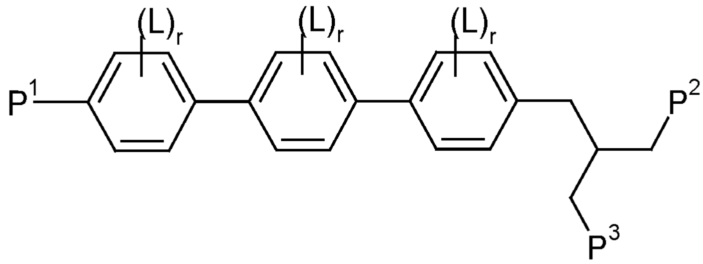

M27

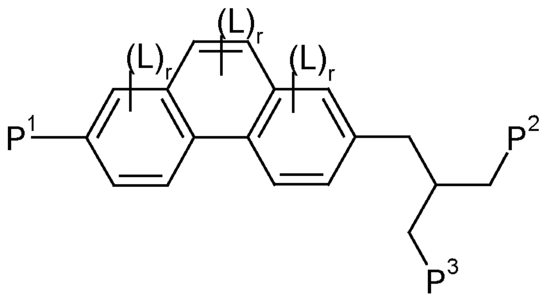

M28

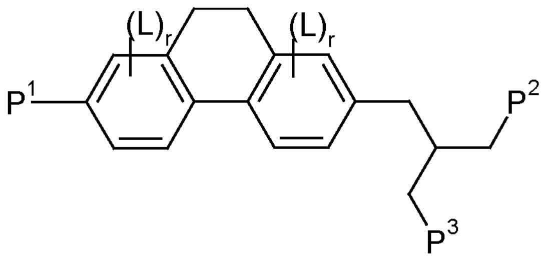

M29

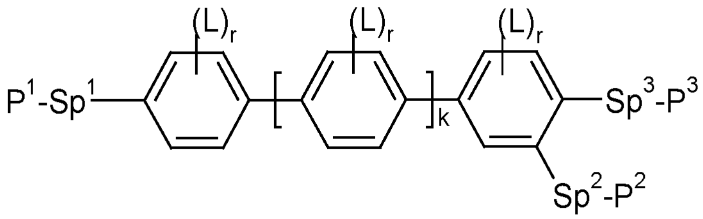

M30

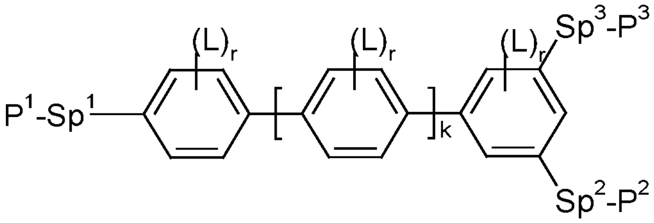

M31

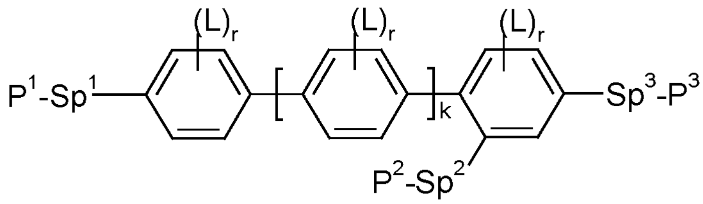

M32

worin die einzelnen Reste, bei jedem Auftreten gleich oder verschieden und jeweils unabhängig voneinander, die folgende Bedeutung besitzen:

$P^1$, $P^2$, $P^3$ eine polymerisierbare Gruppe, vorzugsweise ausgewählt aus Vinyloxy, Acrylat, Methacrylat, Fluoracrylat, Chloracrylat, Oxetan und Epoxy,
$Sp^1$, $Sp^2$, $Sp^3$ eine Einfachbindung oder eine Spacergruppe, wobei zusätzlich einer oder mehrere der Reste $P^1$-$Sp^1$-, $P^2$-$Sp^2$- und $P^3$-$Sp^3$- $R^{aa}$ bedeuten können, mit der Maßgabe, dass mindestens einer der vorhandenen Reste $P^1$-$Sp^1$-, $P^2$-$Sp^2$ und $P^3$-$Sp^3$- von $R^{aa}$ verschieden ist, vorzugsweise $-(CH_2)_{p1}-$, $-(CH_2)_{p1}-O-$, $-(CH_2)_{p1}-CO-O-$oder $-(CH_2)_{p1}-O-CO-O-$, bei denen p1 eine ganze Zahl von 1 bis 12 ist,
$R^{aa}$ H, F, Cl, CN oder geradkettiges oder verzweigtes Alkyl mit 1 bis 25 C-Atomen, worin zusätzlich eine oder mehrere nicht benachbarte $CH_2$-Gruppen jeweils unabhängig voneinander so durch $-C(R^0)=C(R^{00})-$, -C≡C-, $-N(R^0)-$, -O-, -S-, -CO-, -CO-O-, -O-CO-, -O-CO-O-ersetzt sein können, dass O- und/oder S-Atome nicht direkt miteinander verknüpft sind, und worin zusätzlich ein oder mehrere H-Atome durch F, Cl, CN oder $P^1$-$Sp^1$- ersetzt sein können, besonders bevorzugt geradkettiges oder verzweigtes, gegebenenfalls ein- oder mehrfach fluoriertes Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen (wobei die Alkenyl- und Alkinylreste mindestens zwei C-Atome aufweisen und die verzweigten Reste mindestens drei C-Atome aufweisen), und bei denen $R^{aa}$ keine Gruppe $P^1$, $P^2$ oder $P^3$ bedeutet oder enthält,
$R^0$, $R^{00}$ H oder Alkyl mit 1 bis 12 C-Atomen,
$R^y$ und $R^z$ H, F, $CH_3$ oder $CF_3$,
$X^1$, $X^2$, $X^3$ -CO-O-, -O-CO- oder eine Einfachbindung,
$Z^{M1}$ -O-, -CO-, $-C(R^yR^z)-$ oder $-CF_2CF_2-$,
$Z^{M2}$, $Z^{M3}$ -CO-O-, -O-CO-, $-CH_2O-$, $-OCH_2-$, $-CF_2O-$, $-OCF_2-$ oder $-(CH_2)_n-$, wobei n 2, 3 oder 4 ist,
L F, Cl, CN oder geradkettiges oder verzweigtes, gegebenenfalls ein- oder mehrfach fluoriertes Alkyl, Alkoxy, Alkenyl, Alkinyl, Alkylcarbonyl, Alkoxycarbonyl, Alkyl-carbonyloxy oder Alkoxycarbonyloxy mit 1 bis 12 C-Atomen,
L', L" H, F oder Cl,
k 0 oder 1,
r 0, 1, 2, 3 oder 4,
s 0, 1, 2 oder 3,
t 0, 1 oder 2,
x 0 oder 1.

8. FK-Medium nach einem oder mehreren der Ansprüche 1 bis 7, **dadurch gekennzeichnet, dass** es eine oder mehrere zusätzliche polymerisierbare Verbindungen enthält, die ausgewählt sind aus den Formeln CM und MT

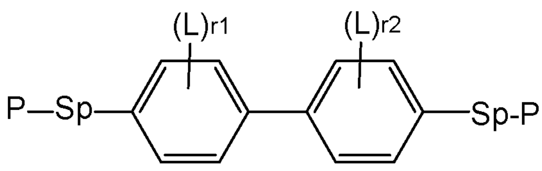

CM

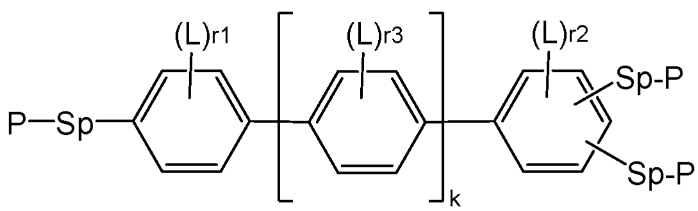

MT

worin die einzelnen Reste, bei jedem Auftreten gleich oder verschieden und jeweils unabhängig voneinander, die folgende Bedeutung besitzen:

P, Sp eine der in Anspruch 1 genannten Bedeutungen,
L F, Cl, CN oder geradkettiges oder verzweigtes, gegebenenfalls ein- oder mehrfach fluoriertes Alkyl, Alkoxy, Alkenyl, Alkinyl, Alkylcarbonyl, Alkoxycarbonyl, Alkyl-carbonyloxy oder Alkoxycarbonyloxy mit 1 bis 12 C-Atomen,
k 0 oder 1,
r1, r2, r3 0, 1, 2, 3 oder 4, vorzugsweise 0, 1 oder 2, ganz bevorzugt 0 oder 1.

**9.** FK-Medium nach Anspruch 8, **dadurch gekennzeichnet, dass** die zusätzlichen polymerisierbaren Verbindungen ausgewählt sind aus den folgenden Unterformeln

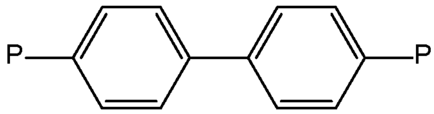
CM-1-1

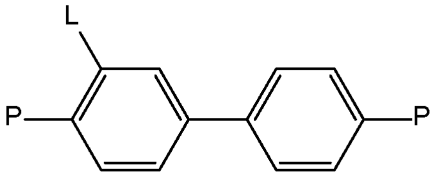
CM-1-2

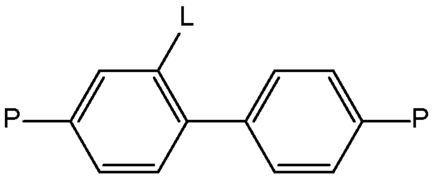
CM-1-3

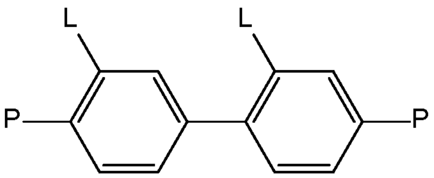
CM-1-4

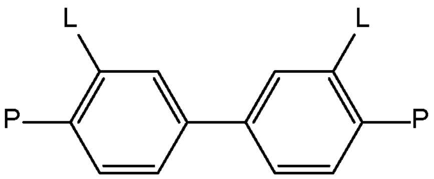
CM-1-5

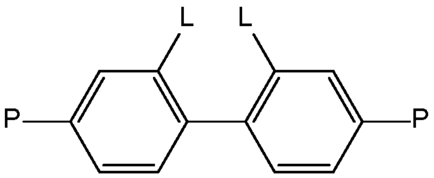
CM-1-6

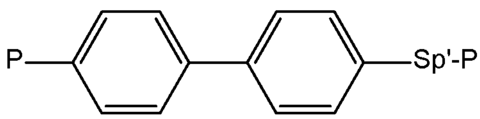
CM-2-1

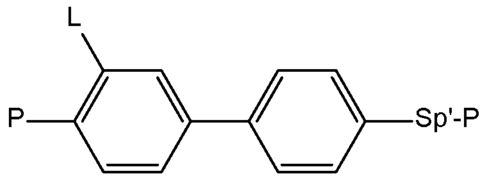

CM-2-2

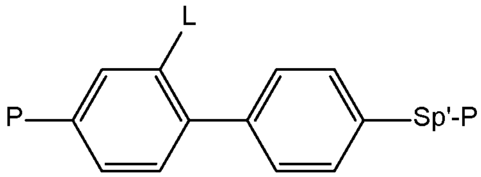

CM-2-3

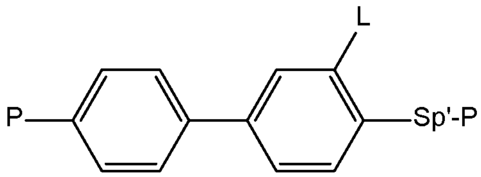

CM-2-4

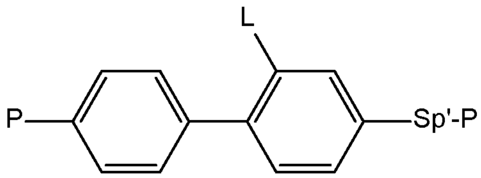

CM-2-5

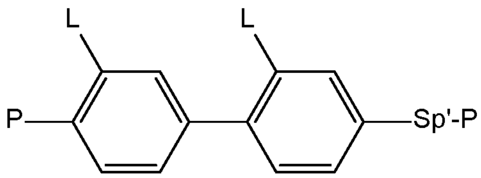

CM-2-6

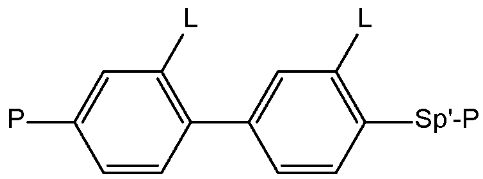

CM-2-7

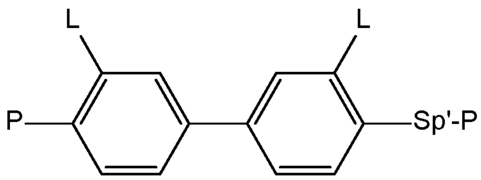

CM-2-8

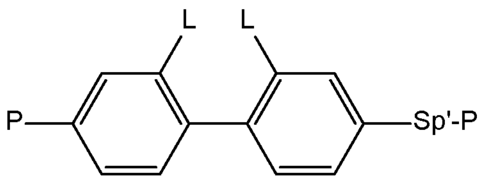

CM-2-9

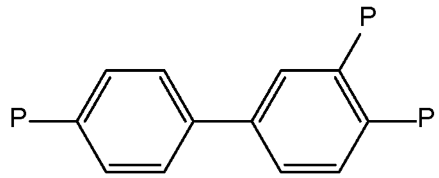

MT-1-1

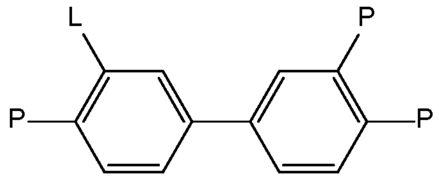

MT-1-2

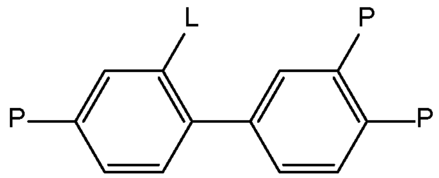

MT-1-3

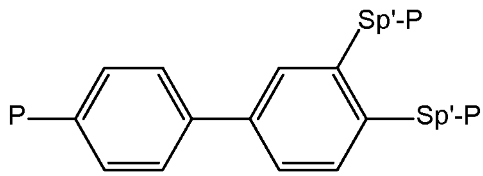

MT-1-4

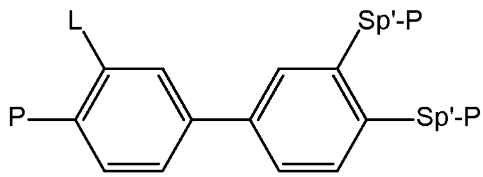

MT-1-5

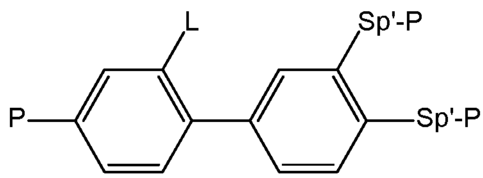

MT-1-6

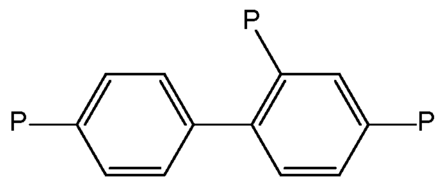

MT-2-1

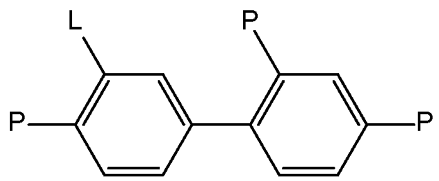

MT-2-2

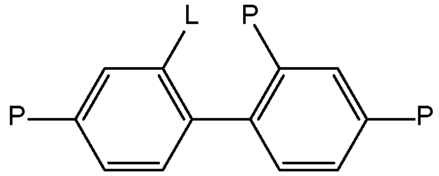

MT-2-3

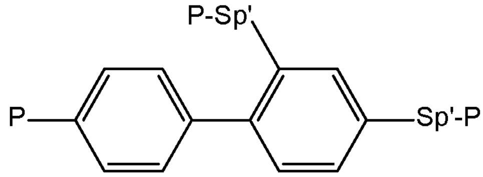

MT-2-4

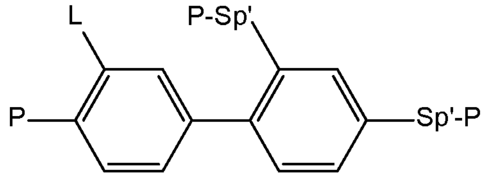

MT-2-5

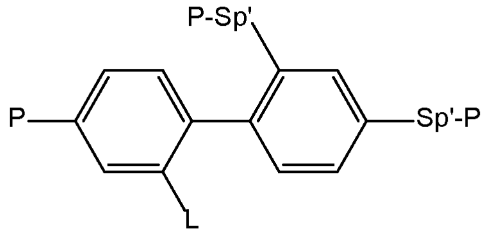

MT-2-6

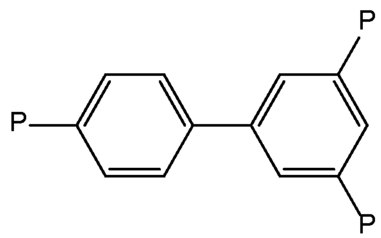

MT-3-1

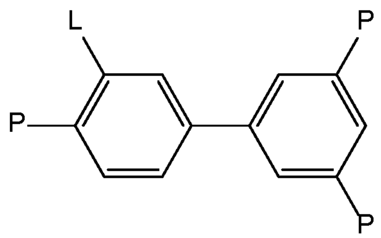

MT-3-2

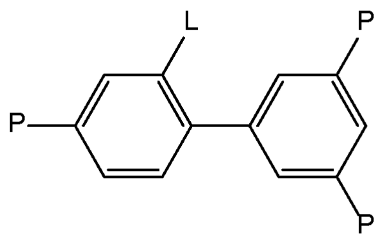

MT-3-3

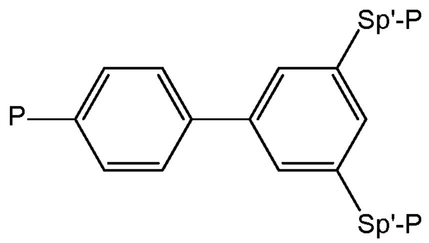

MT-3-4

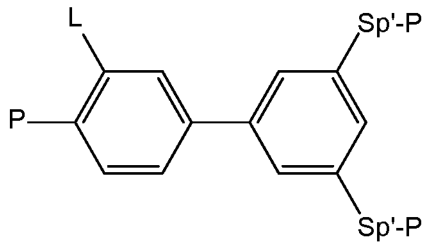

MT-3-5

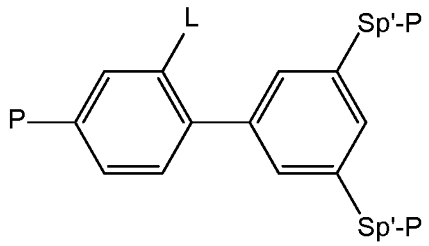

MT-3-6

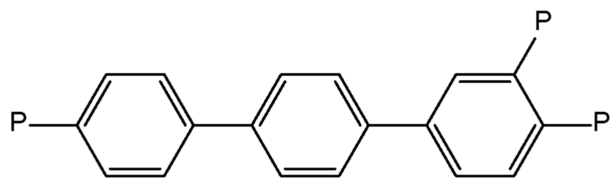

MT-4-1

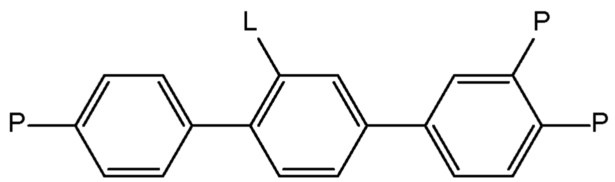

MT-4-2

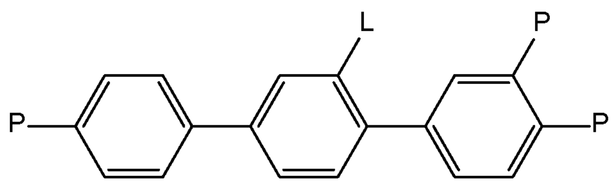

MT-4-3

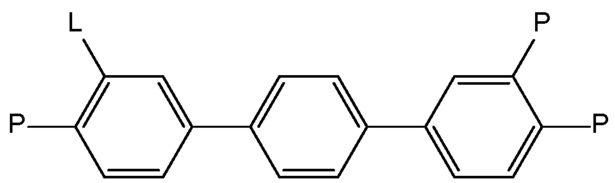

MT-4-4

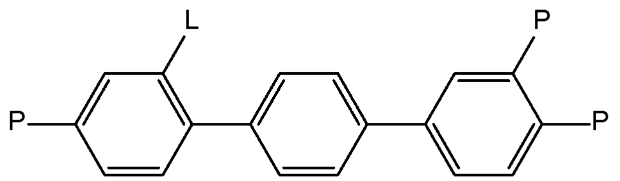

MT-4-5

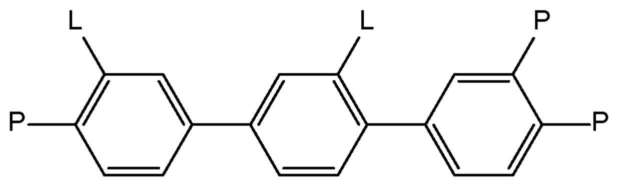

MT-4-6

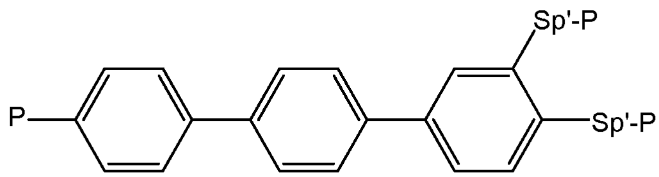

MT-4-7

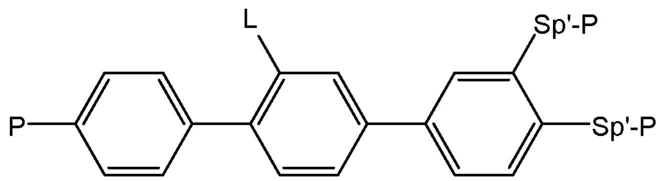

MT-4-8

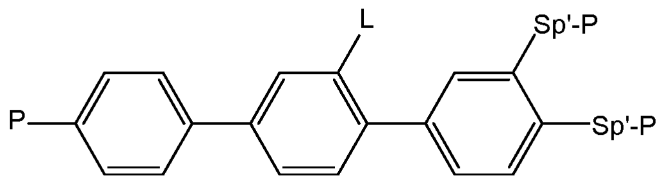

MT-4-9

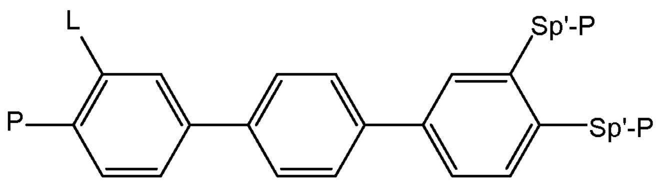

MT-4-10

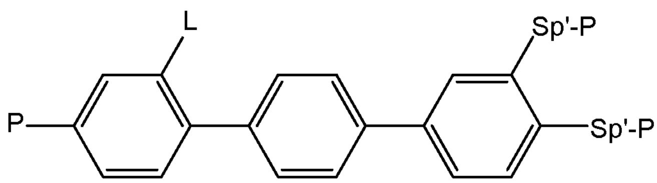

MT-4-11

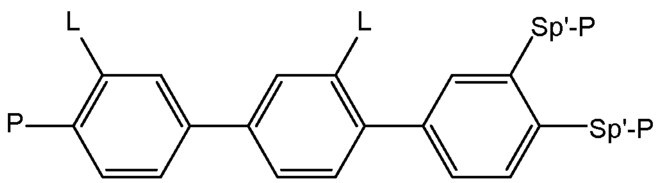

MT-4-12

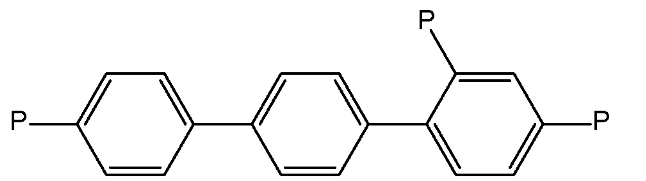

MT-5-1

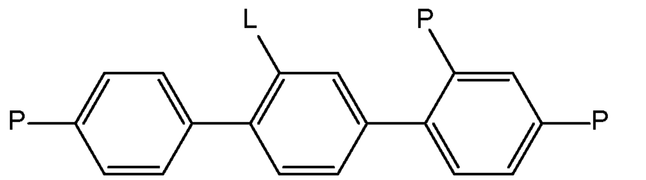

MT-5-2

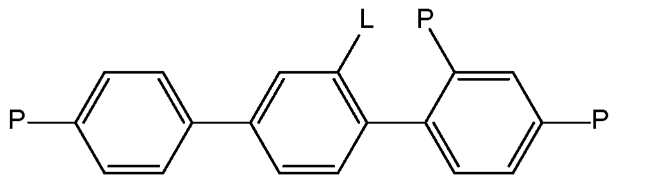

MT-5-3

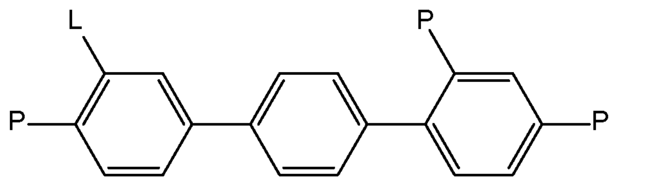

MT-5-4

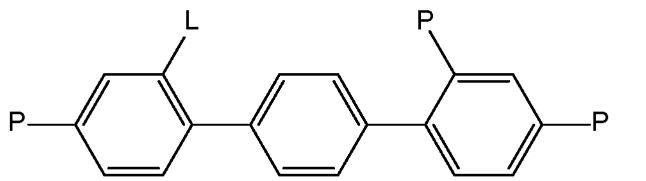

MT-5-5

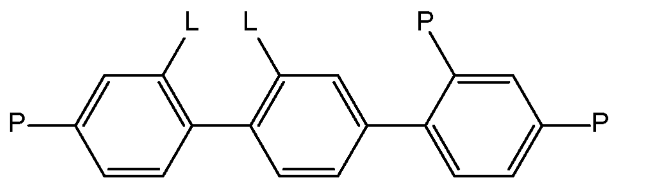

MT-5-6

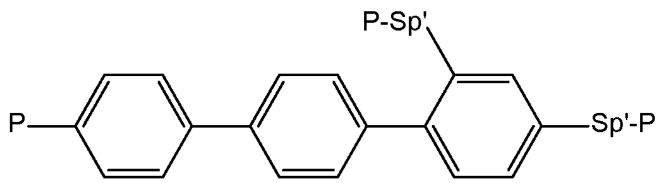

MT-5-7

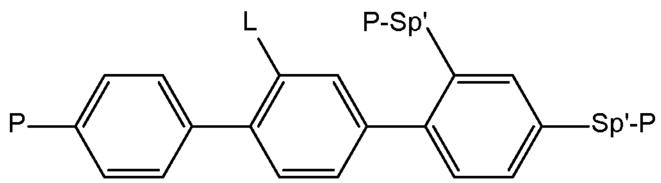

MT-5-8

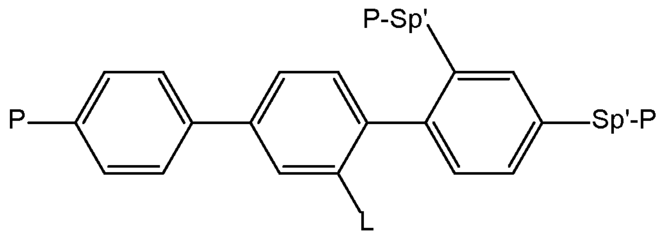

MT-5-9

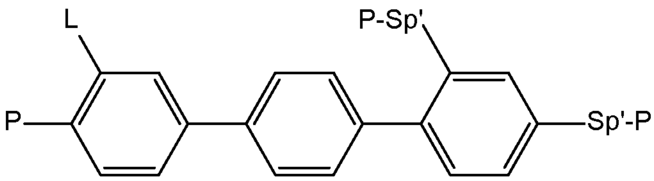

MT-5-10

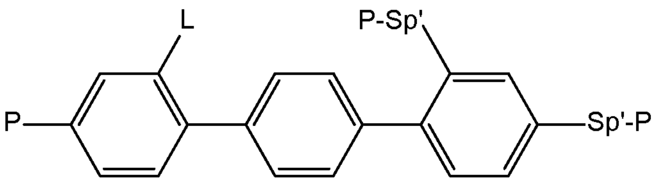

MT-5-11

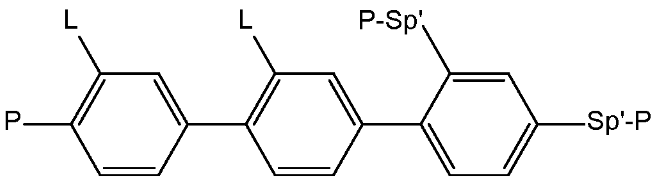

MT-5-12

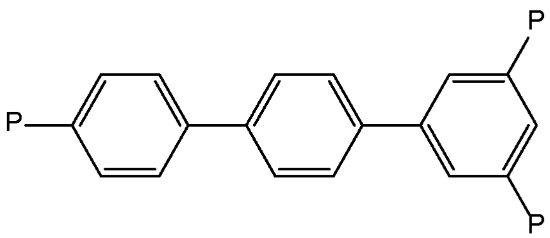

MT-6-1

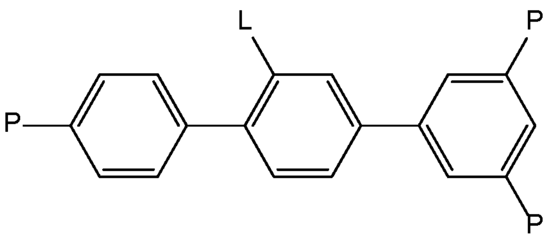

MT-6-2

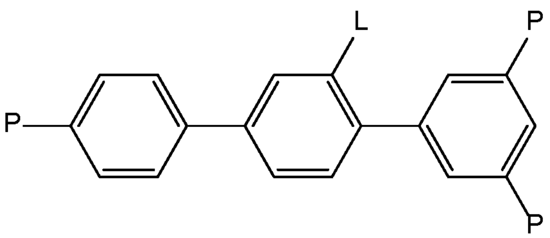

MT-6-3

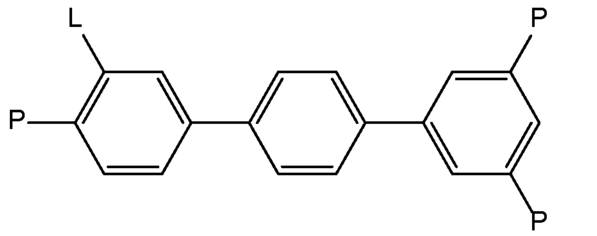

MT-6-4

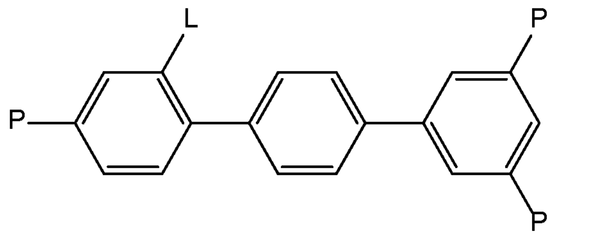

MT-6-5

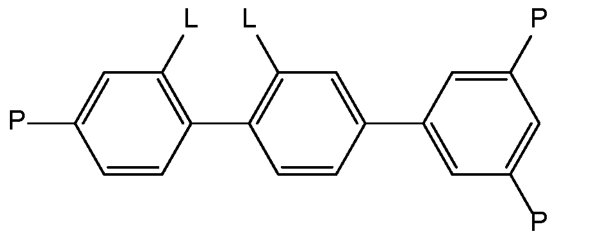

MT-6-6

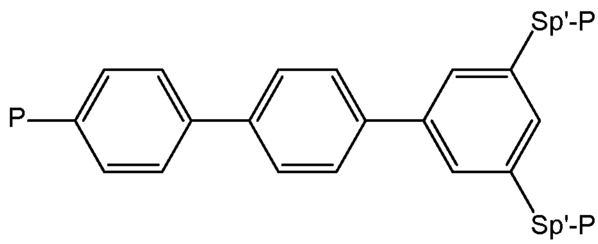

MT-6-7

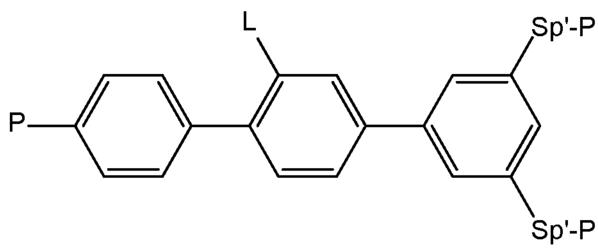

MT-6-8

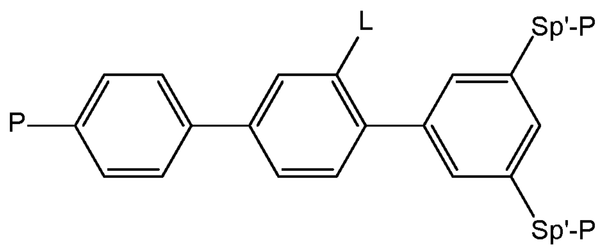

MT-6-9

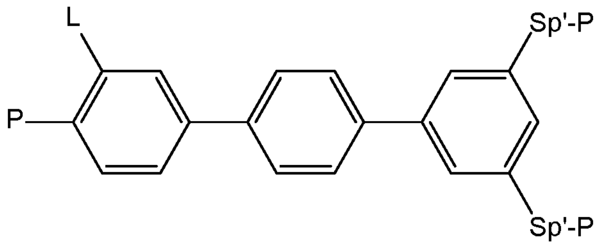

MT-6-10

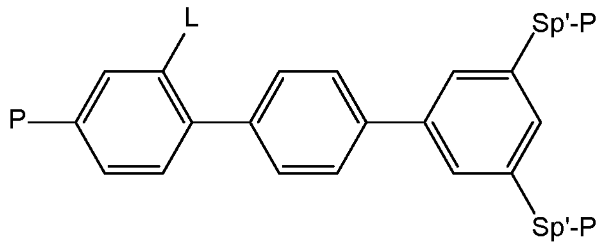

MT-6-11

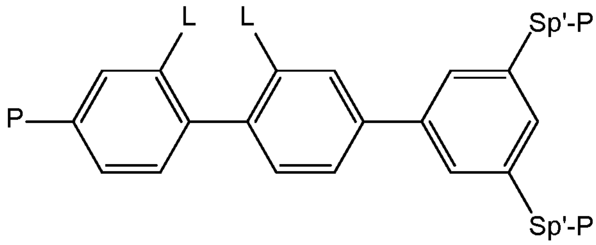

MT-6-12

bei denen P, Sp und L die in Anspruch 8 genannten Bedeutungen besitzen und Sp' eine der für Sp genannten Bedeutungen besitzt, die von einer Einfachbindung verschieden ist.

**10.** FK-Medium nach Anspruch 8 oder 9, **dadurch gekennzeichnet, dass** die zusätzlichen polymerisierbaren Verbindungen ausgewählt sind aus den folgenden Unterformeln

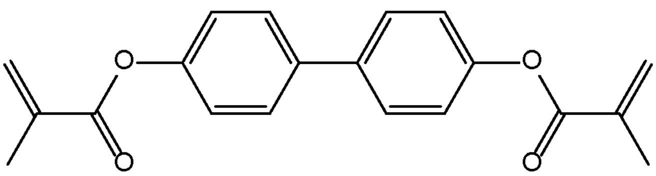

CM-1-1a

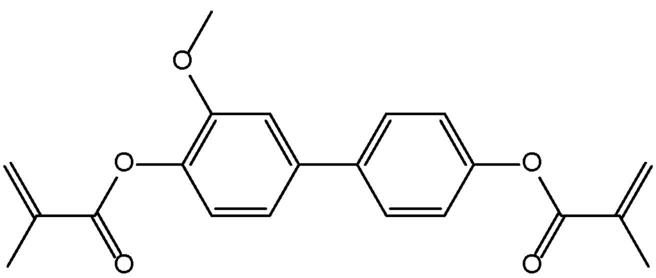

CM-1-2a

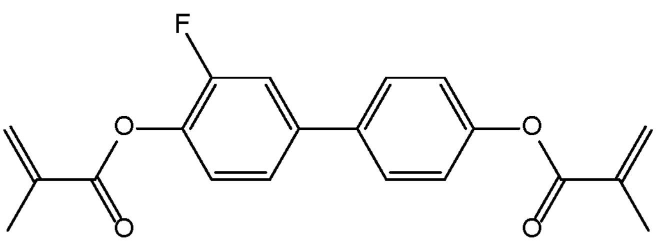

CM-1-2b

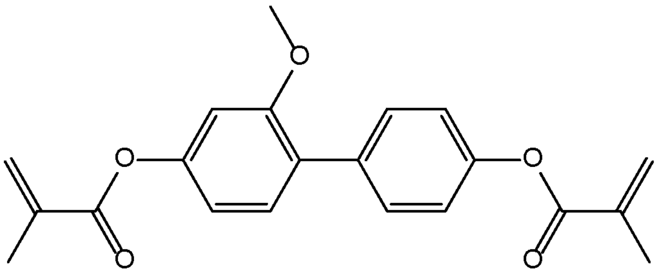

CM-1-3a

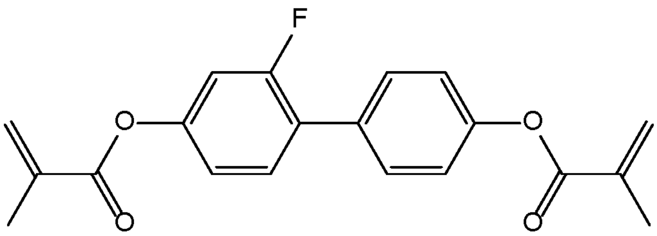

CM-1-3b

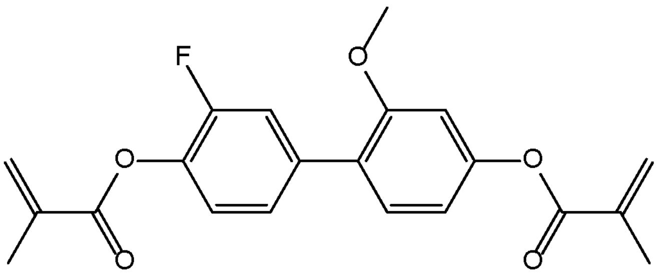

CM-1-4a

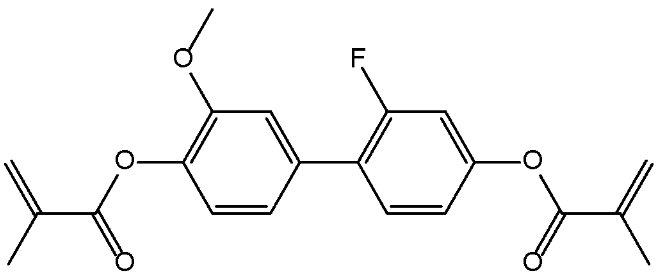

CM-1-4b

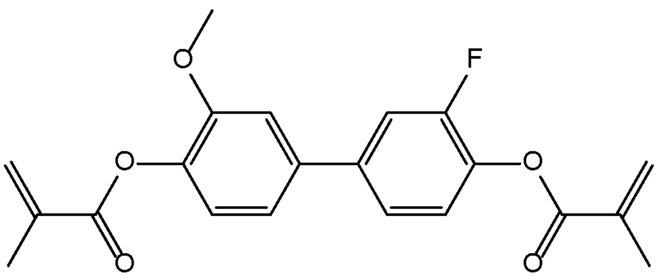

CM-1-5a

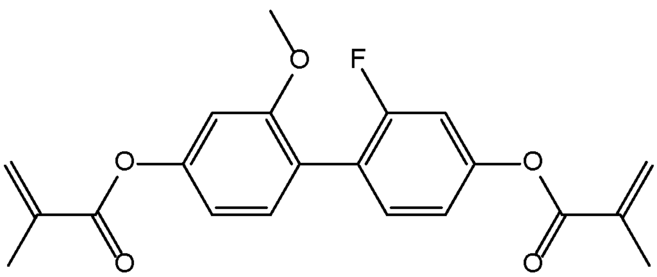

CM-1-6a

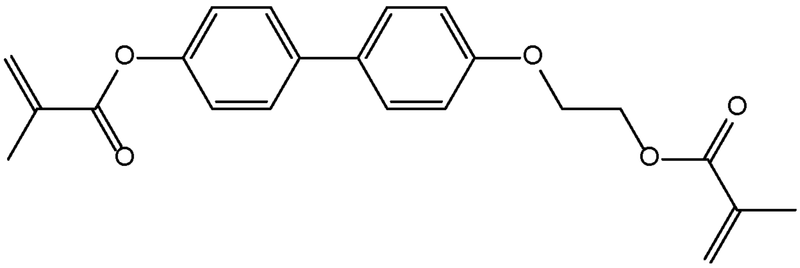

CM-2-1a

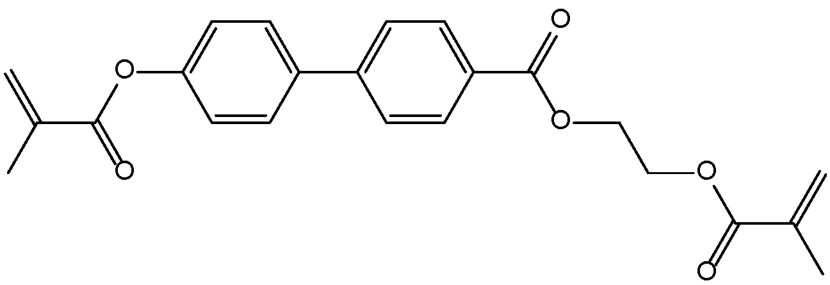

CM-2-1b

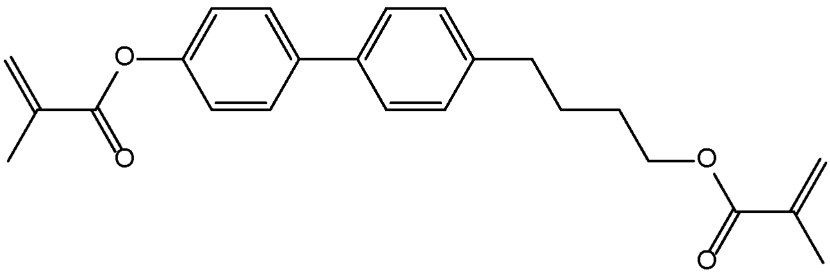

CM-2-1c

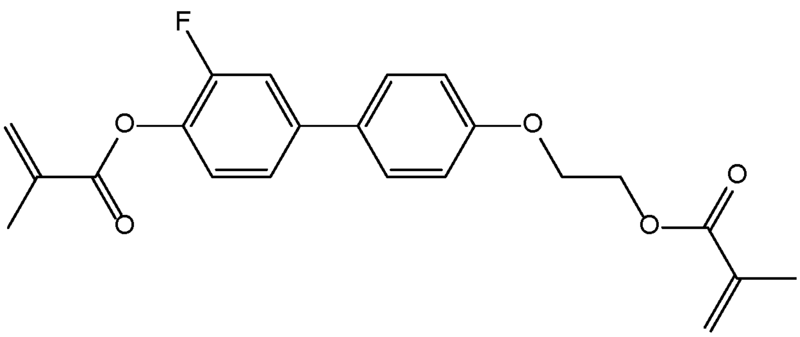

CM-2-2a

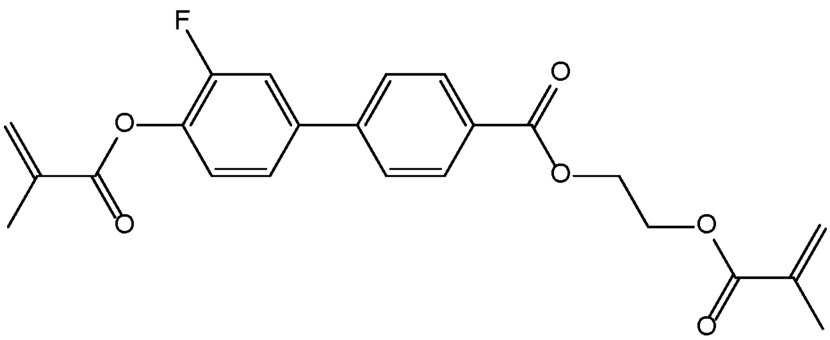

CM-2-2b

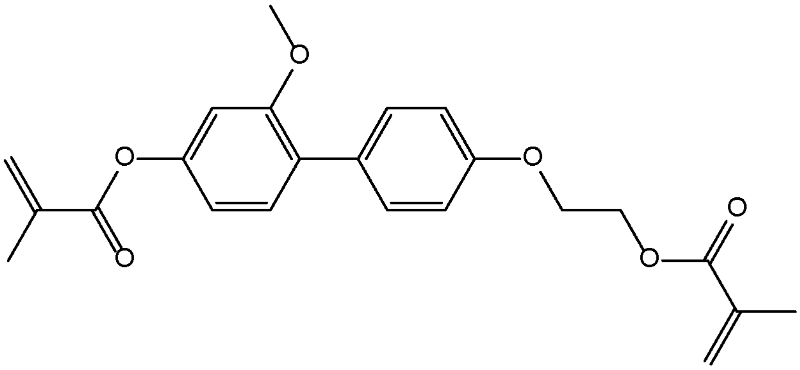

CM-2-3a

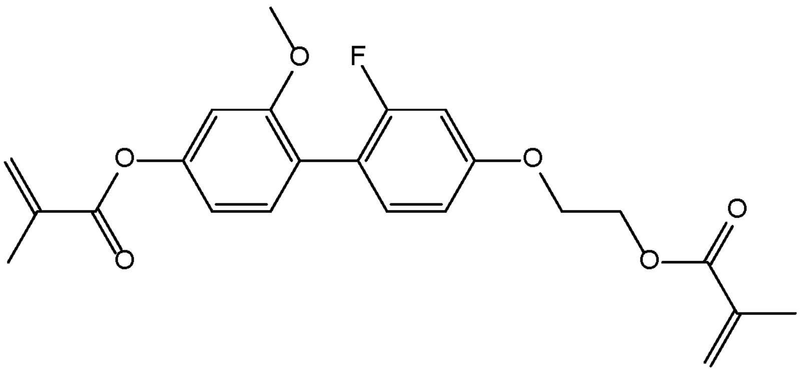

CM-2-9a

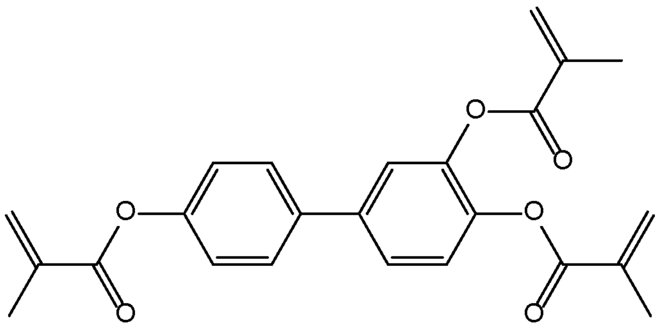

MT-1-1a

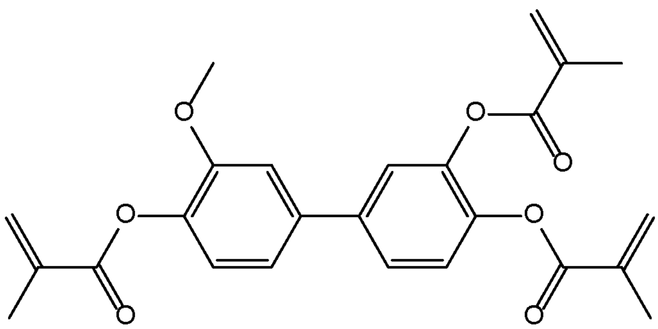

MT-1-2a

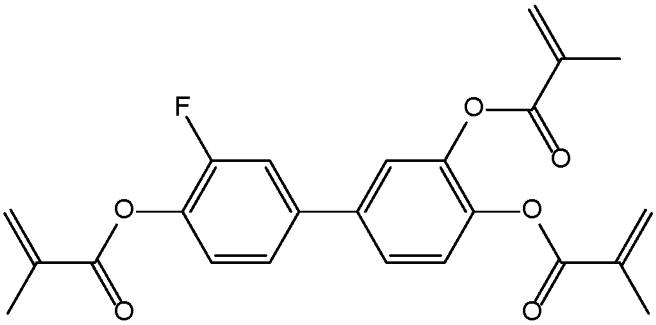

MT-1-2b

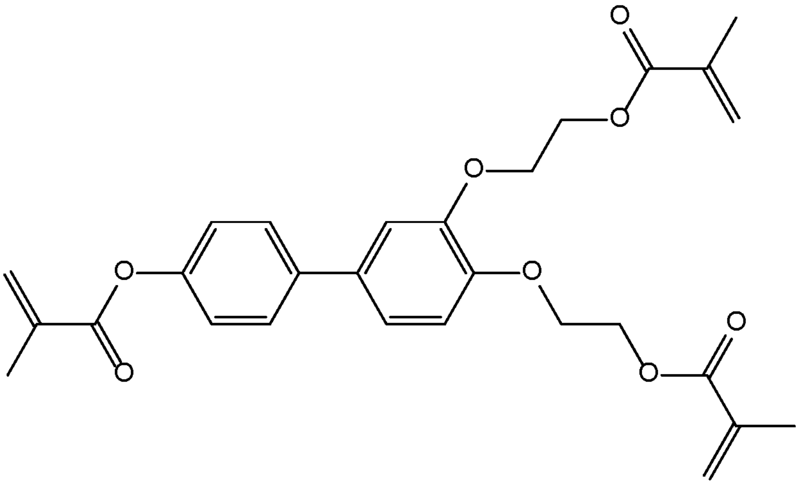

MT-1-4a

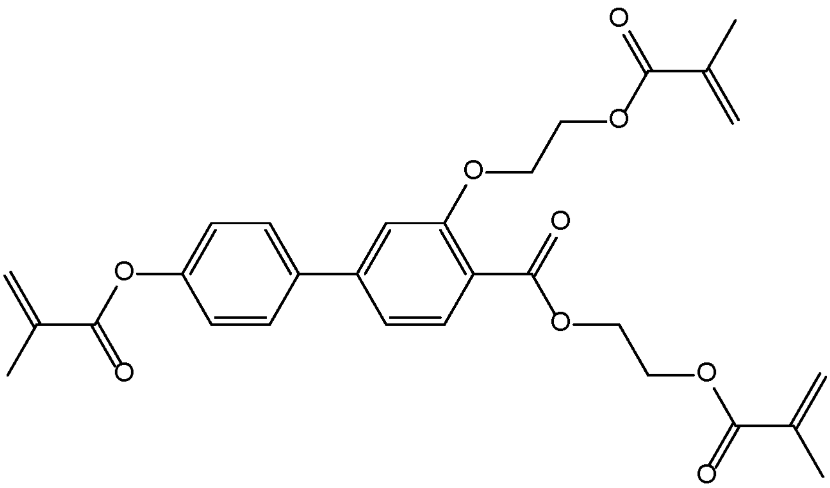

MT-1-4b

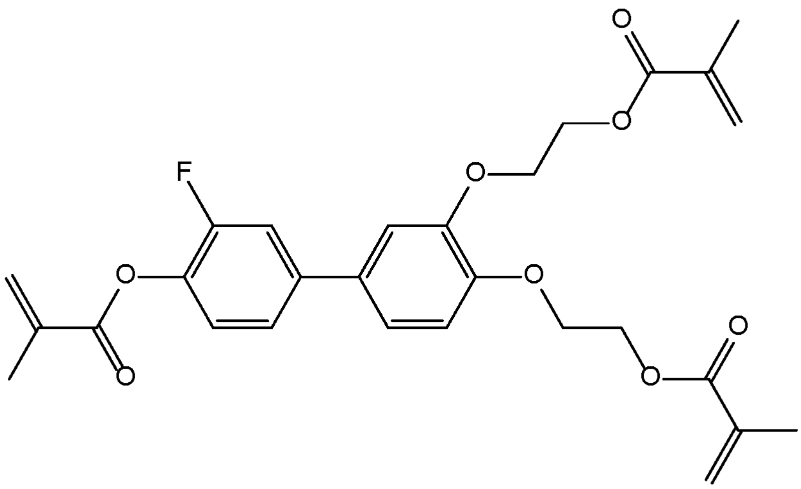

MT-1-5a

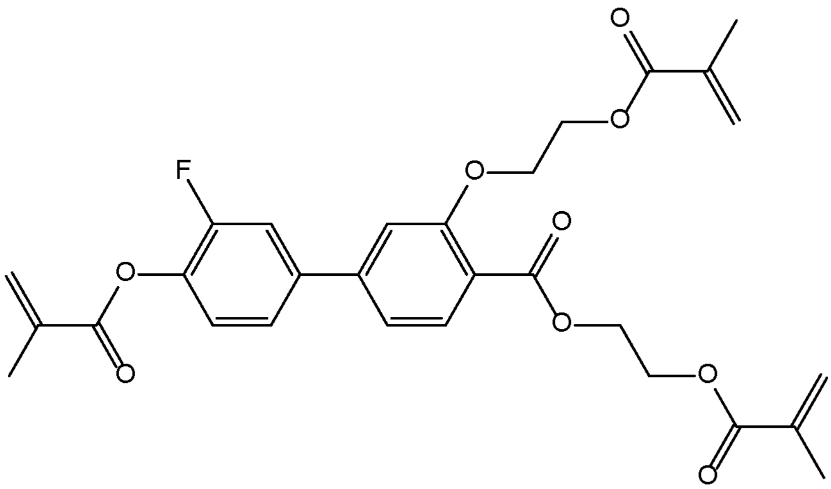

MT-1-5b

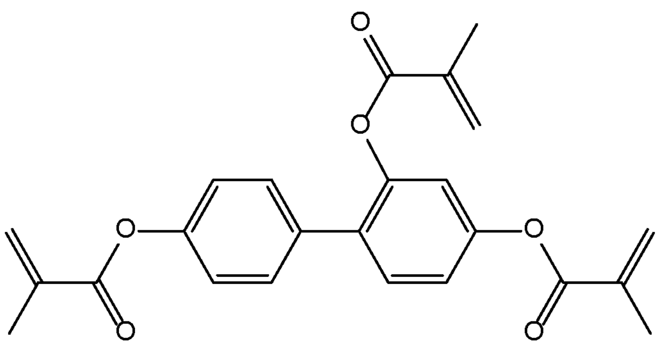

MT-2-1a

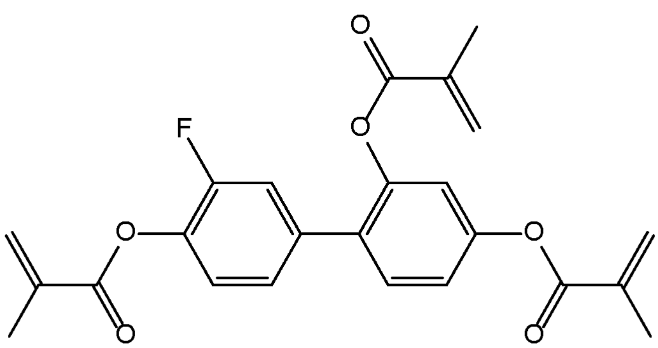

MT-2-2a

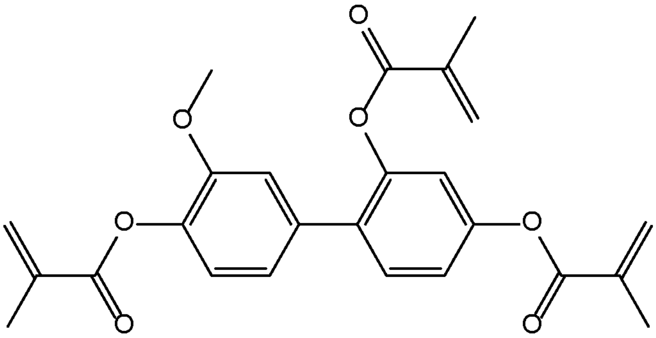

MT-2-2b

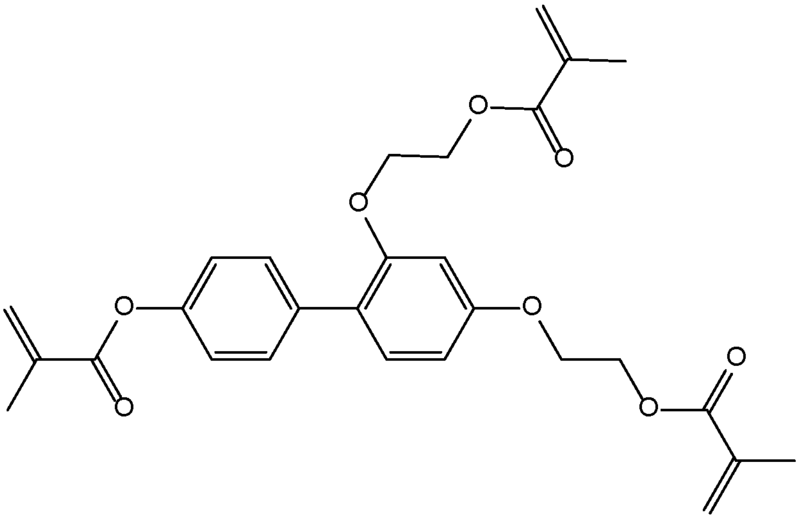

MT-2-4a

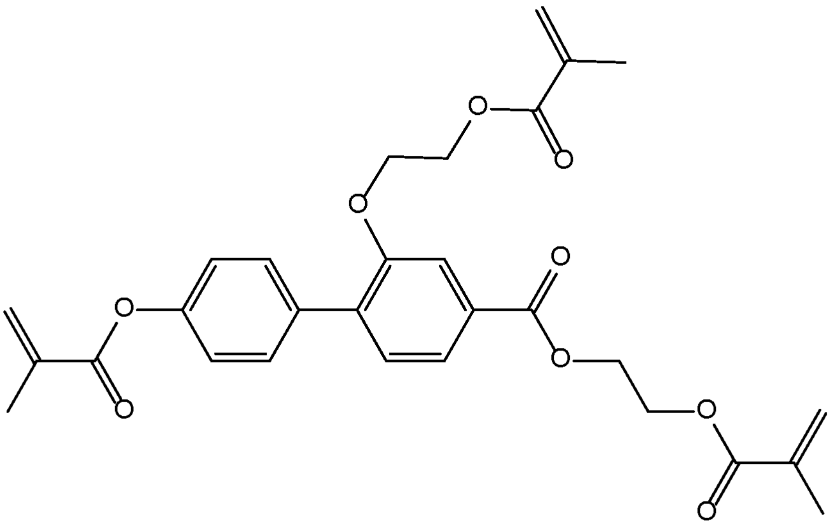

MT-2-4b

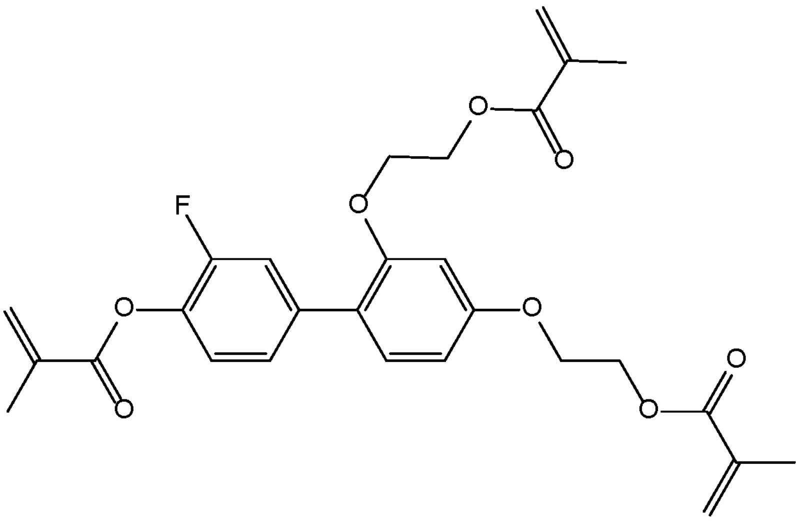

MT-2-5a

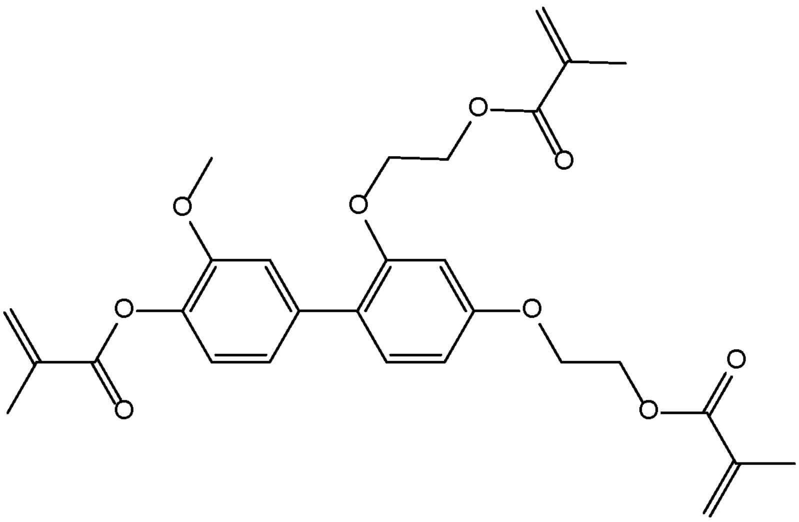

MT-2-5b

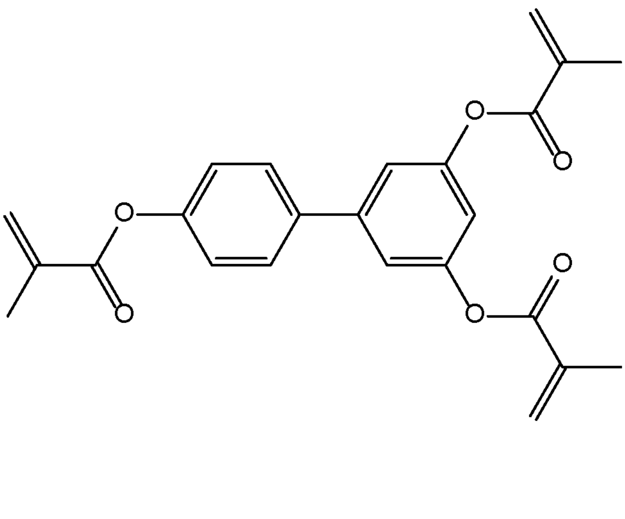

MT-3-1a

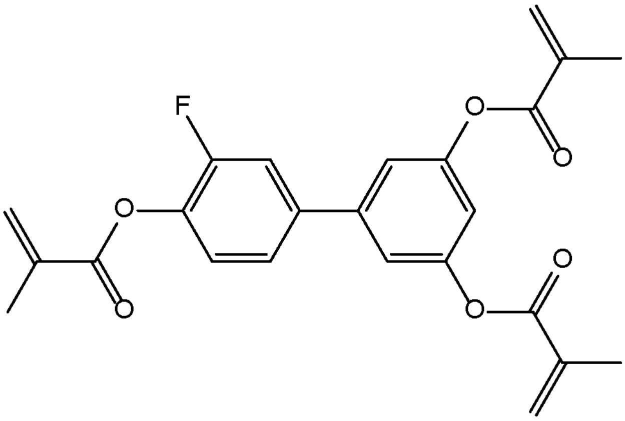

MT-3-2a

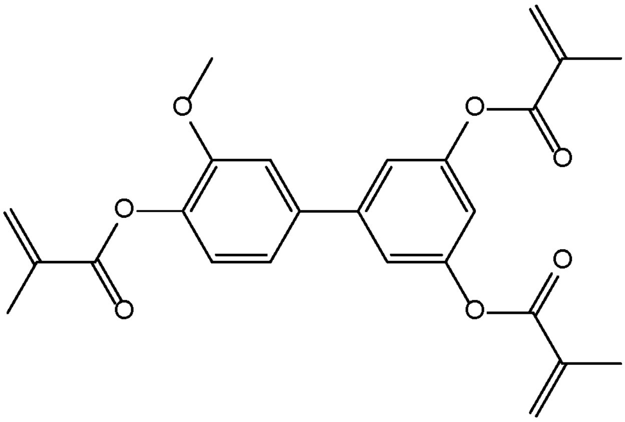

MT-3-2b

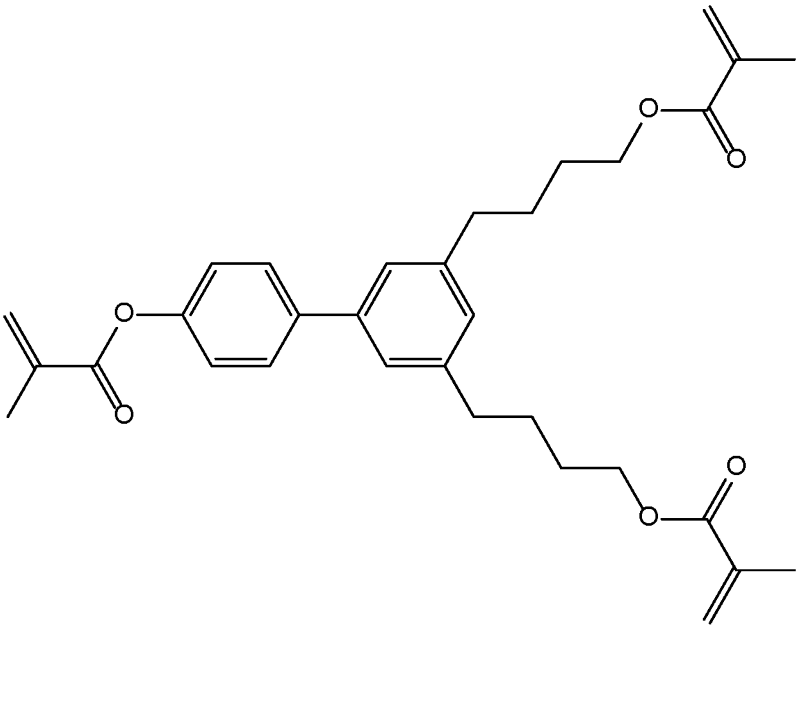

MT-3-4a

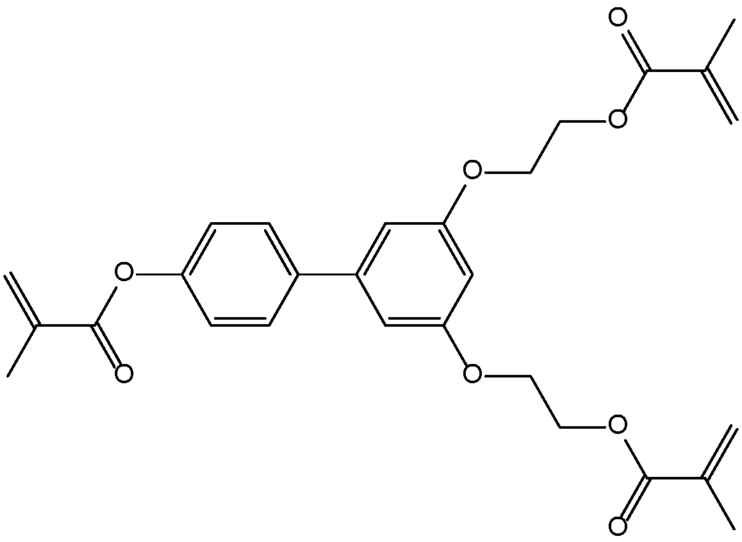

MT-3-4b

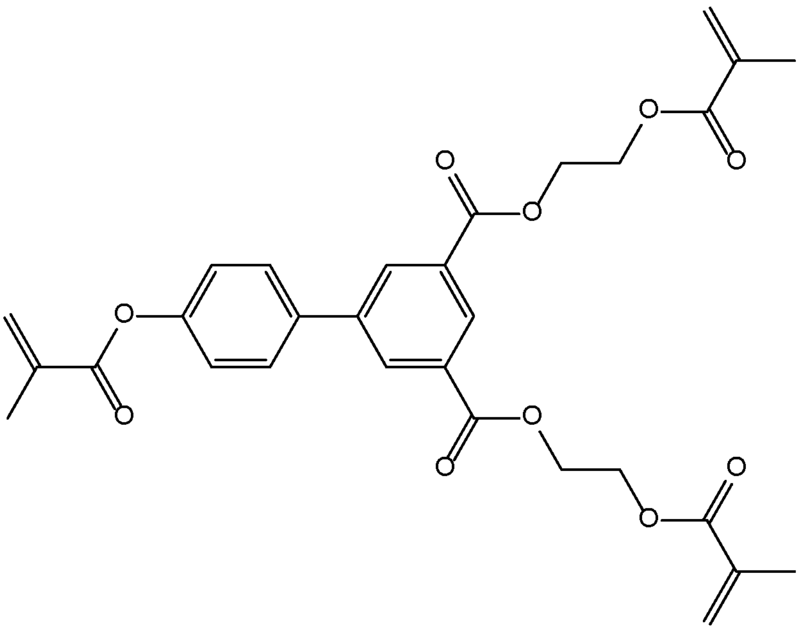

MT-3-4c

MT-3-5a

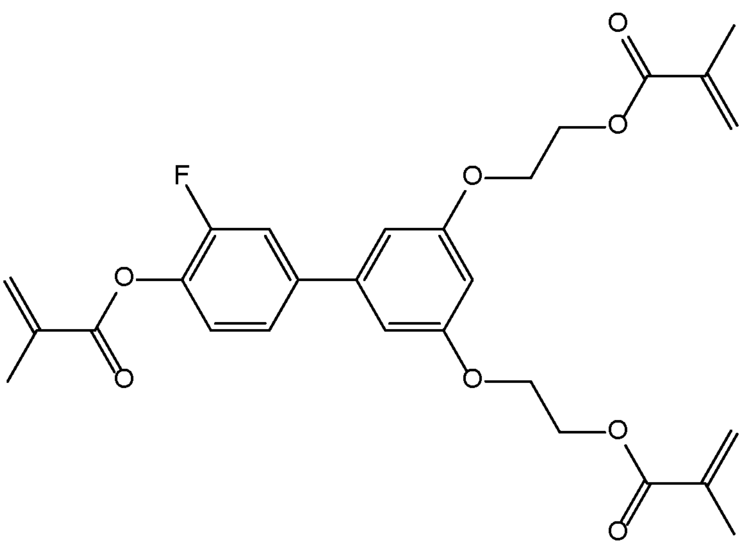

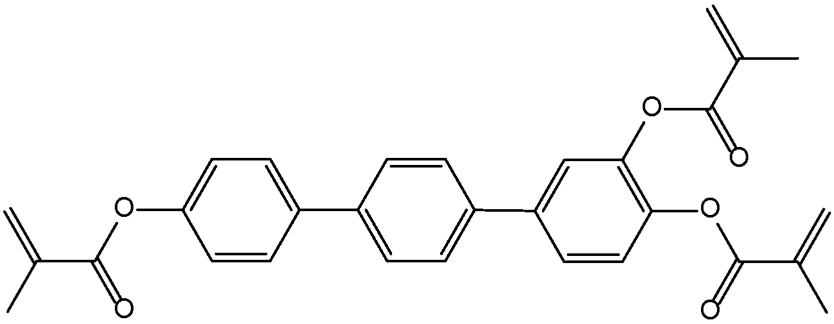

MT-4-1a

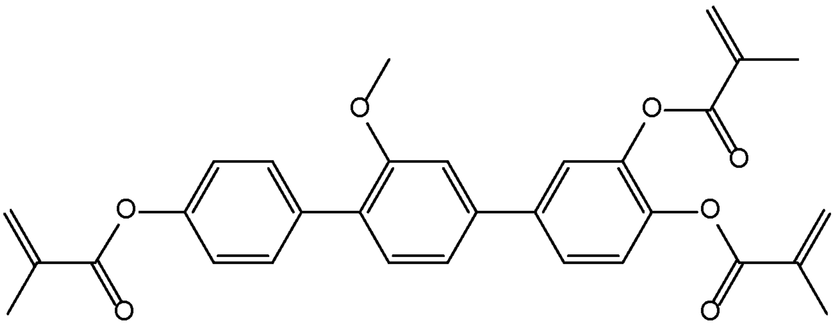

MT-4-2a

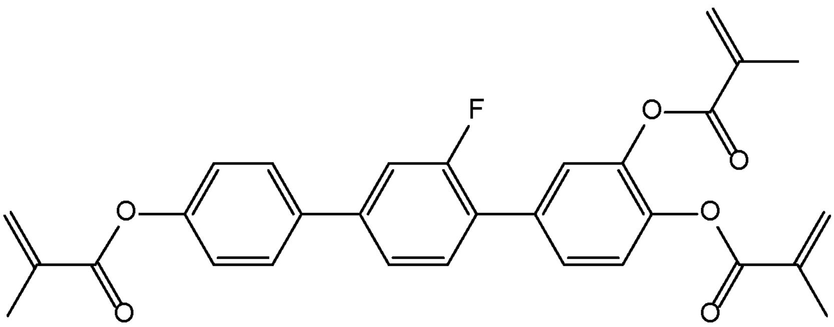

MT-4-3a

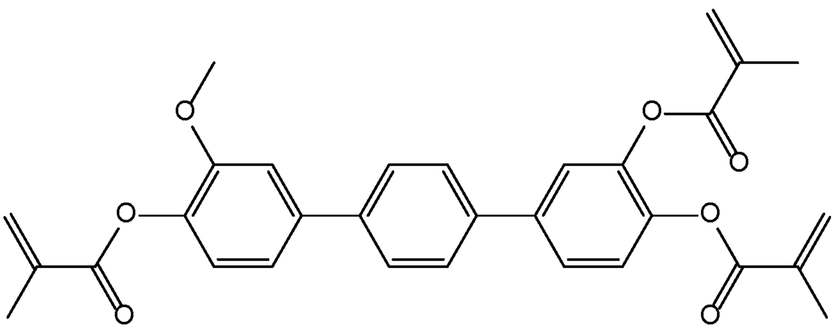

MT-4-4a

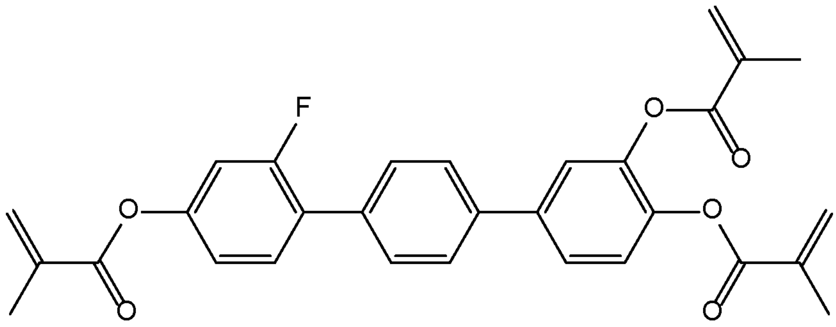

MT-4-5a

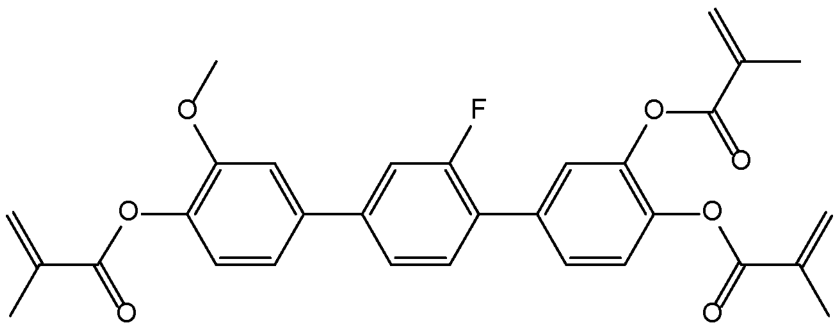

MT-4-6a

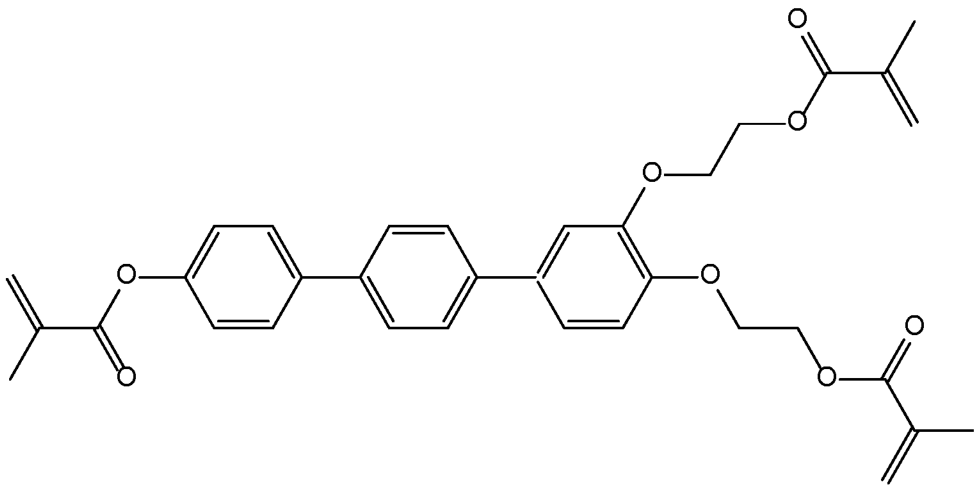

MT-4-7a

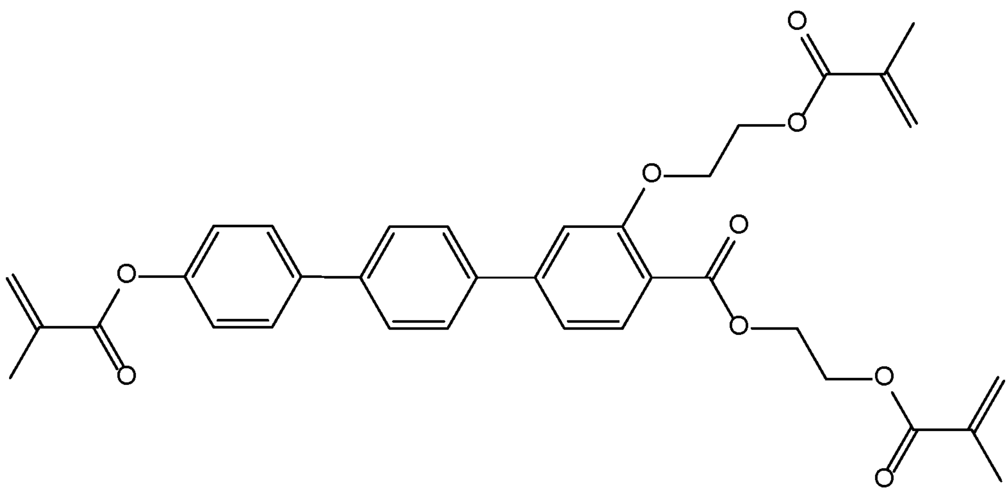

MT-4-7b

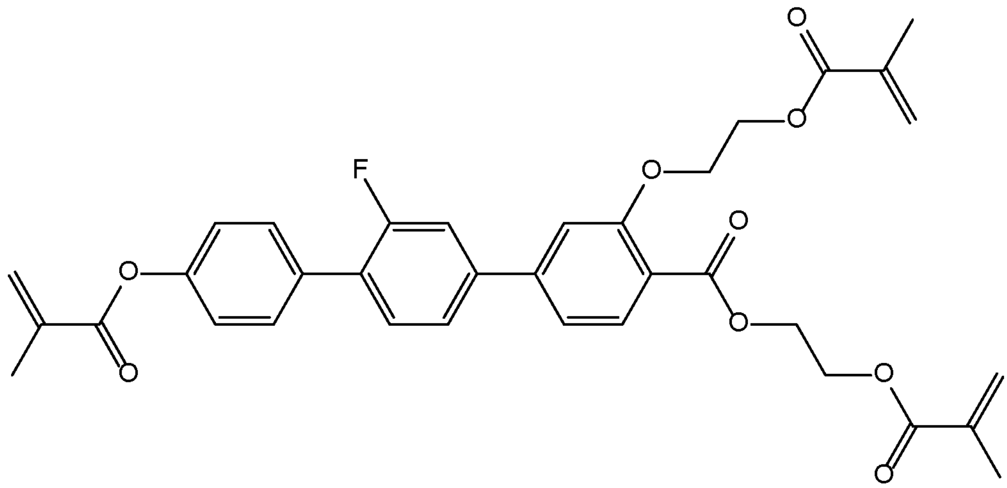

MT-4-8a

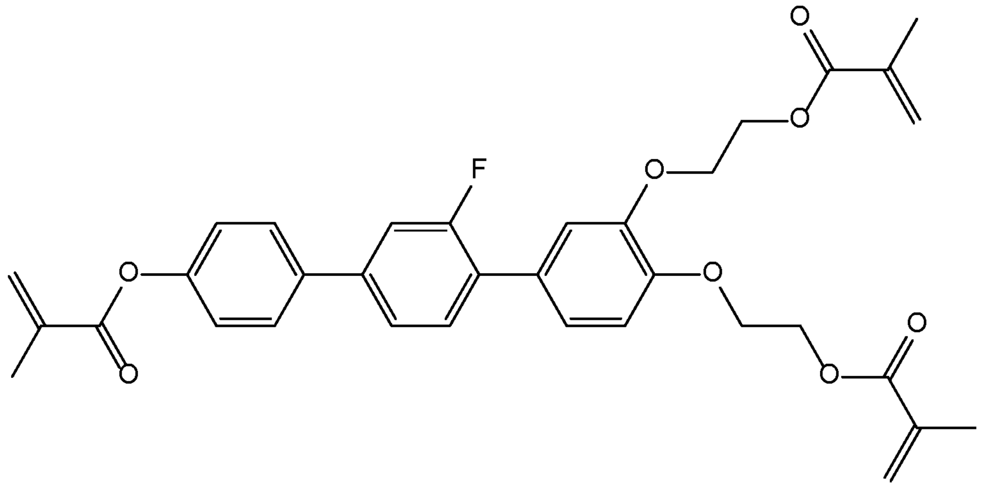

MT-4-9a

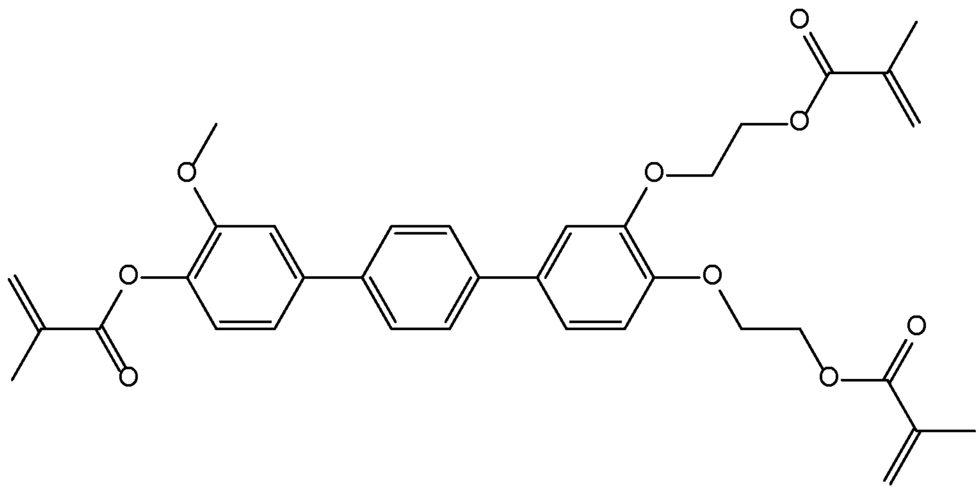

MT-4-10a

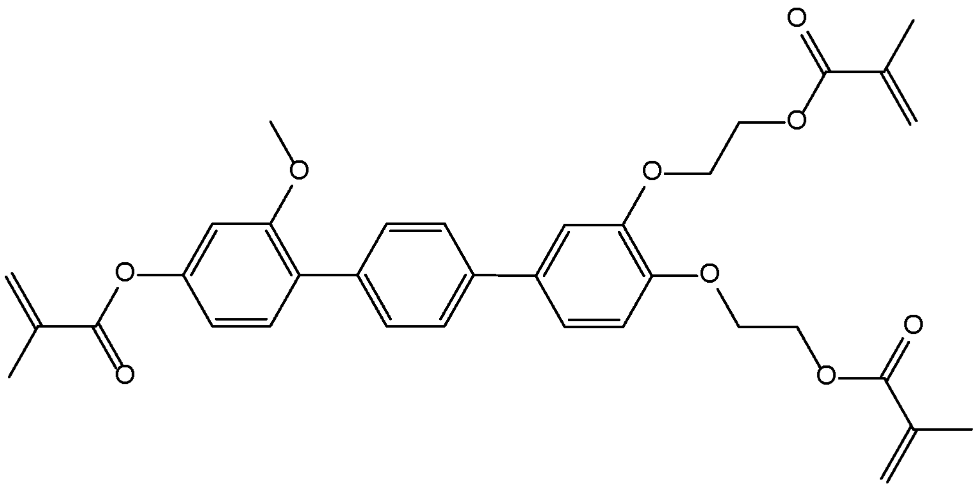

MT-4-11a

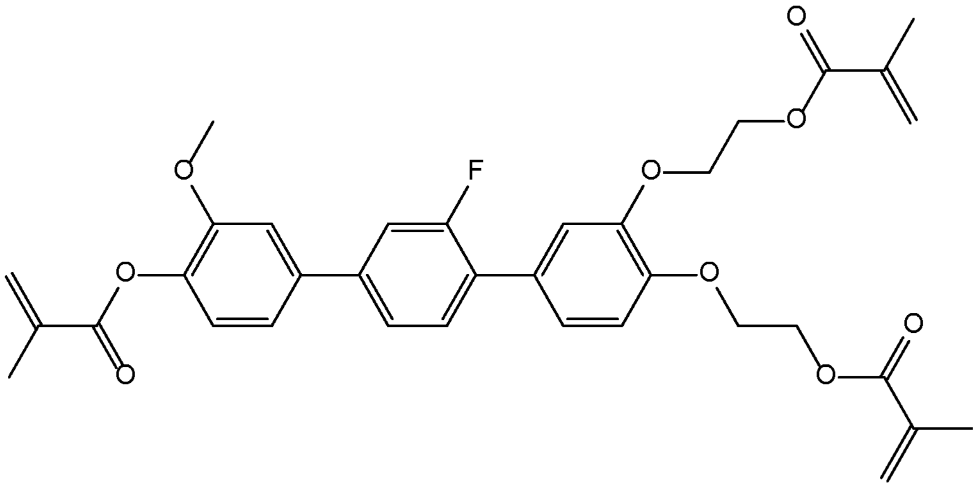

MT-4-12a

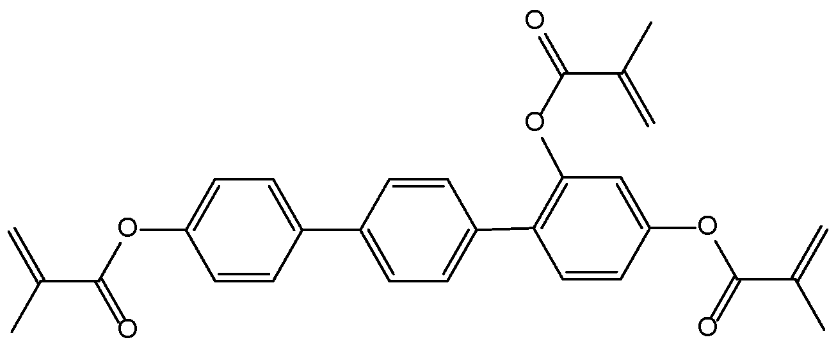

MT-5-1a

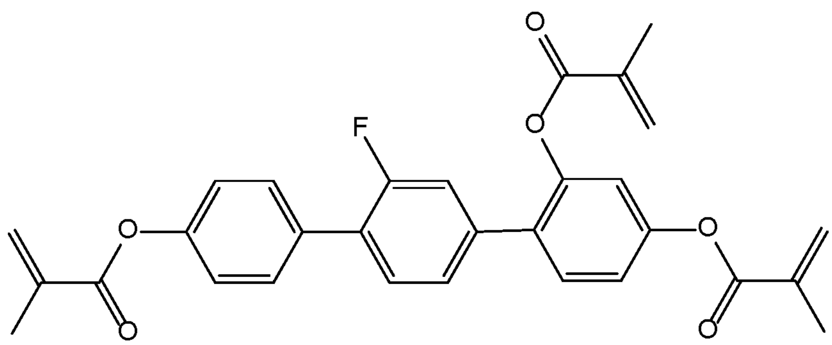

MT-5-2a

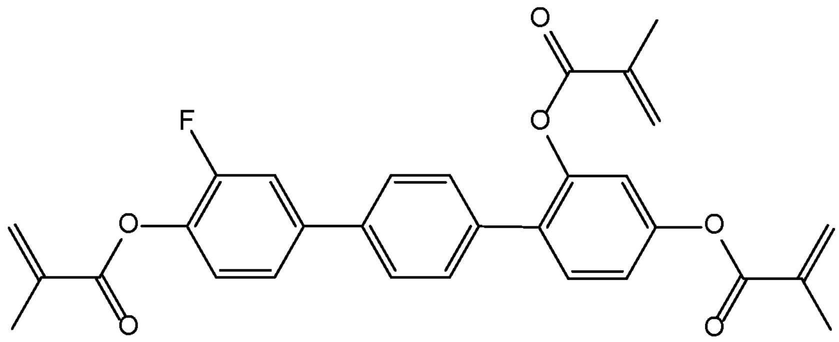

MT-5-4a

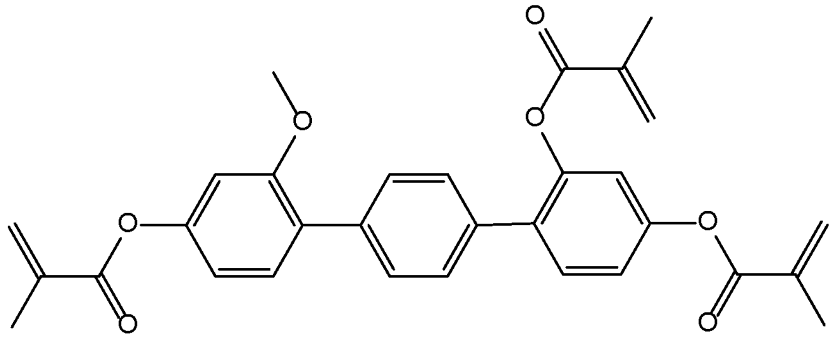

MT-5-5a

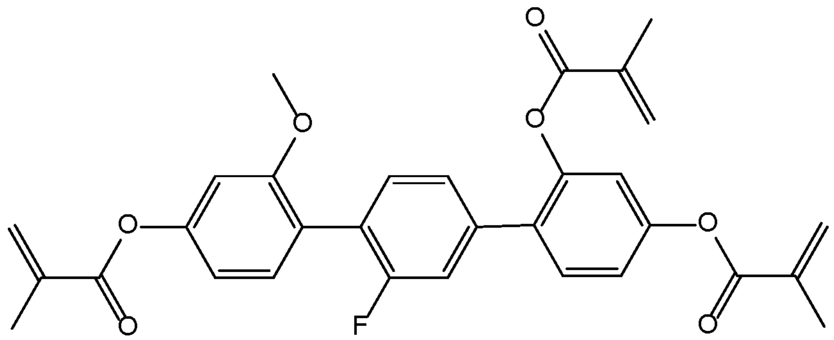

MT-5-6a

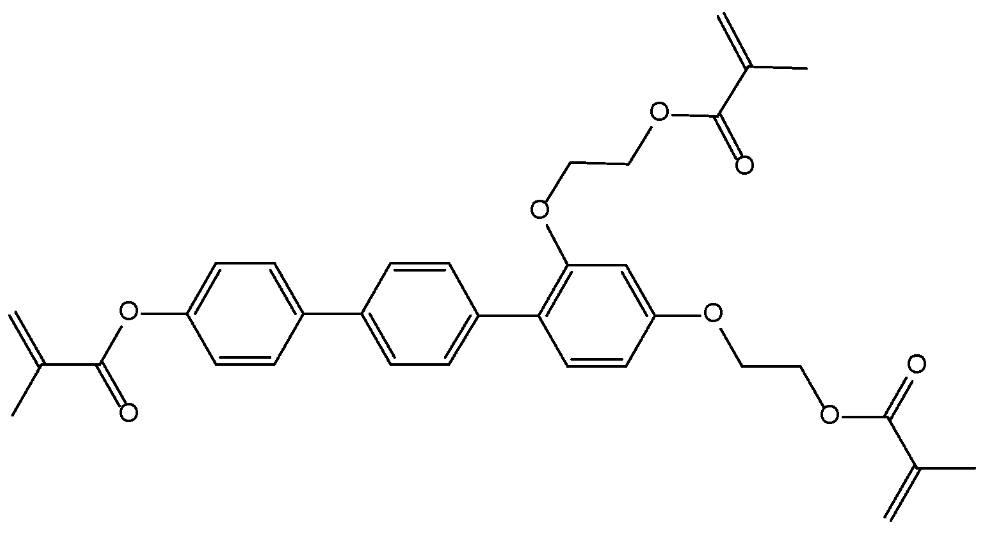

MT-5-7a

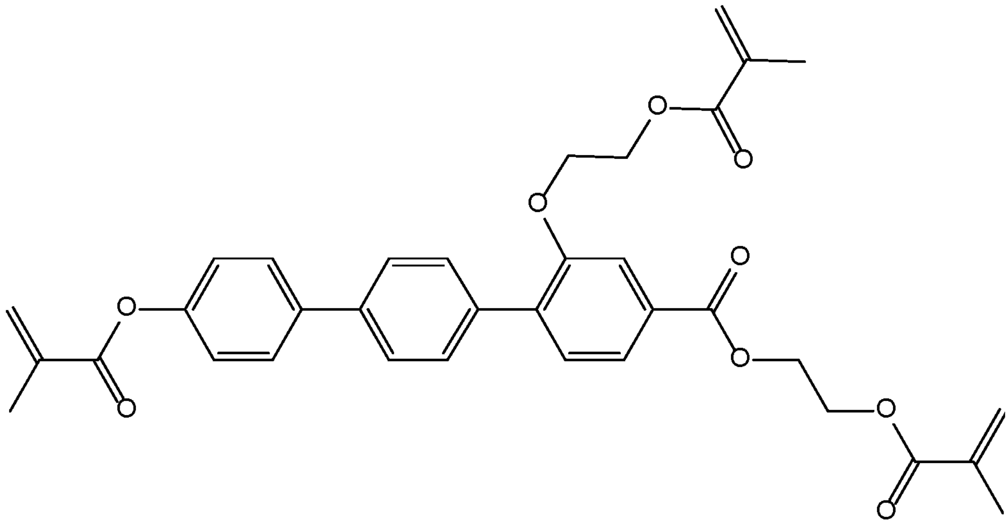

MT-5-7b

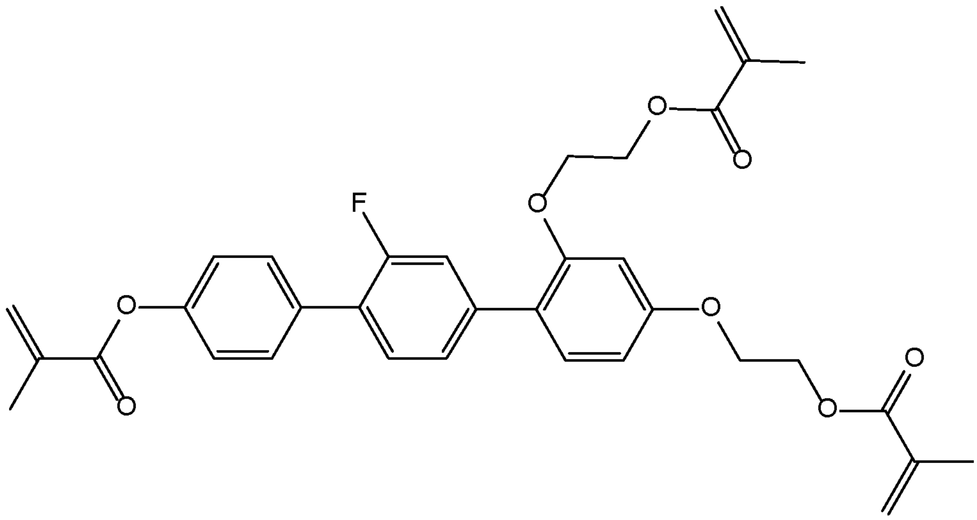

MT-5-8a

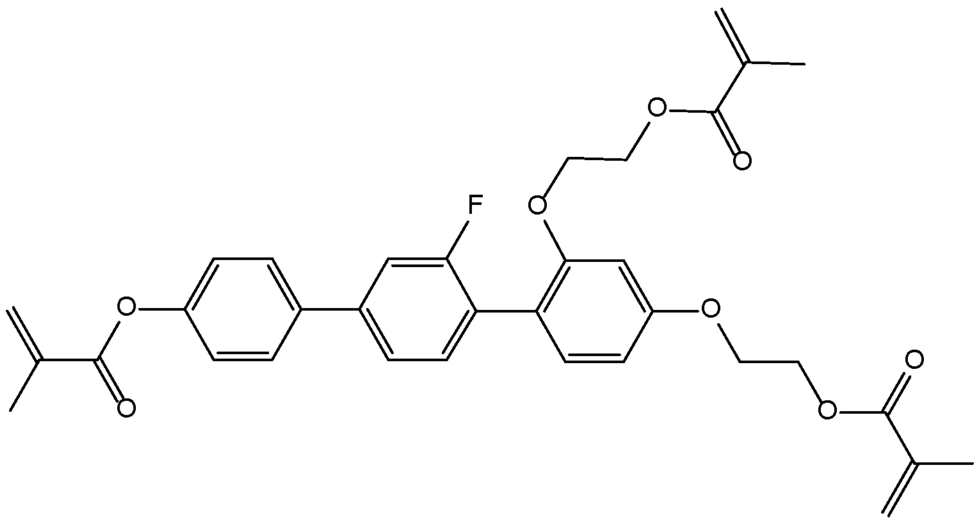

MT-5-9a

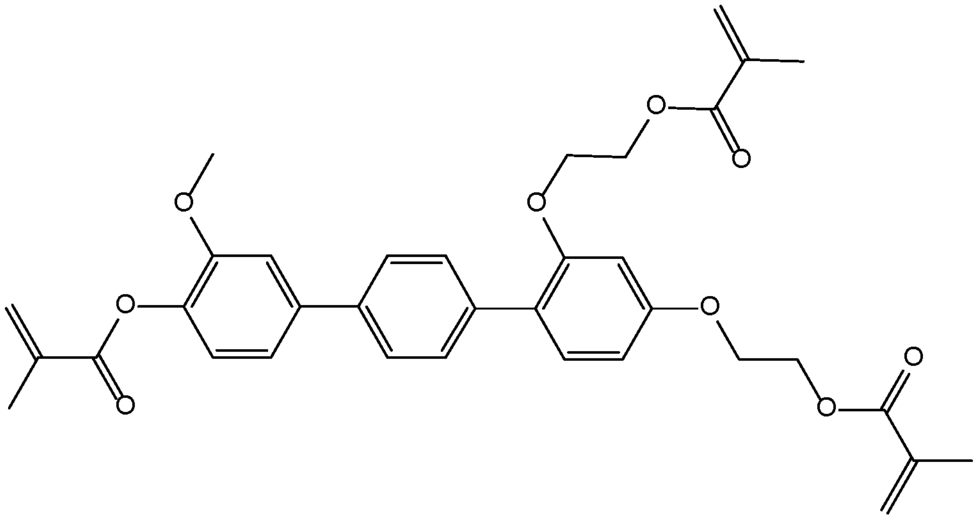

MT-5-10a

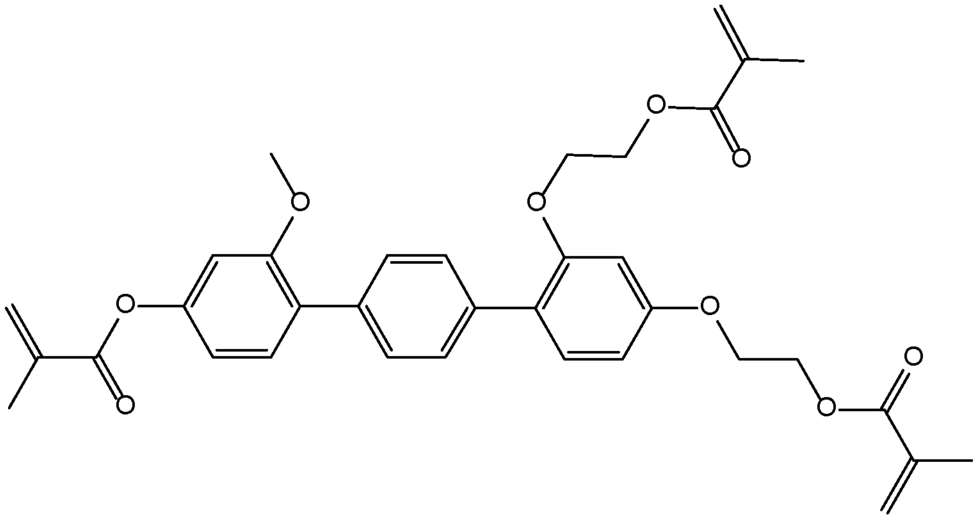

MT-5-11a

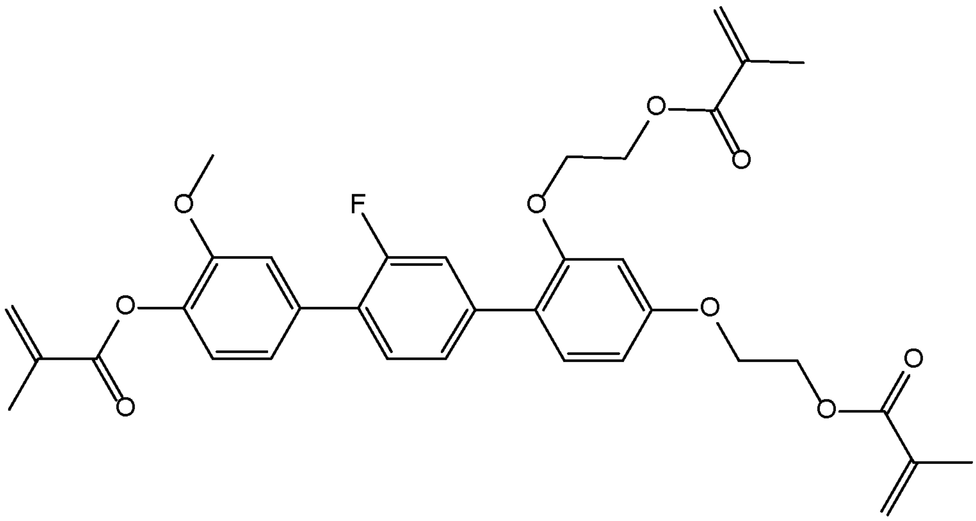

MT-5-12a

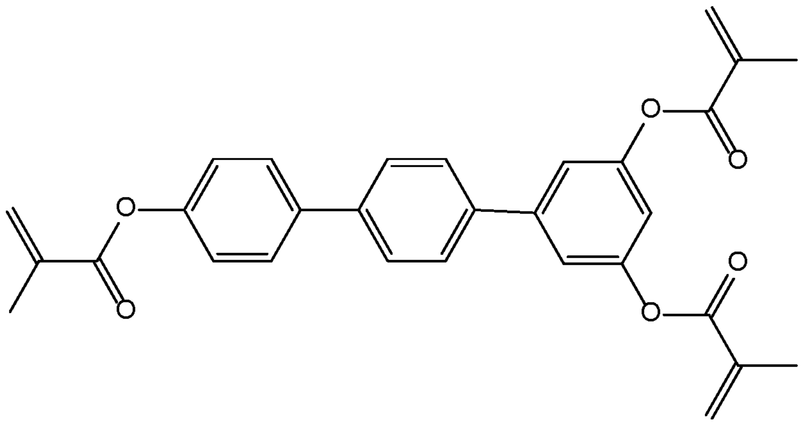

MT-6-1a

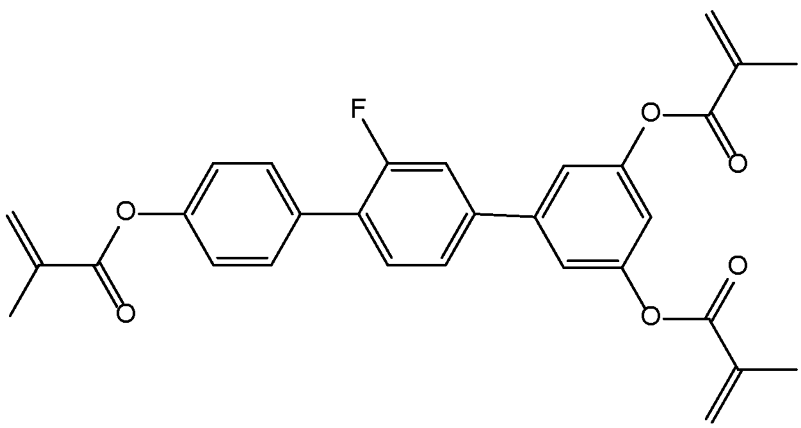

MT-6-2a

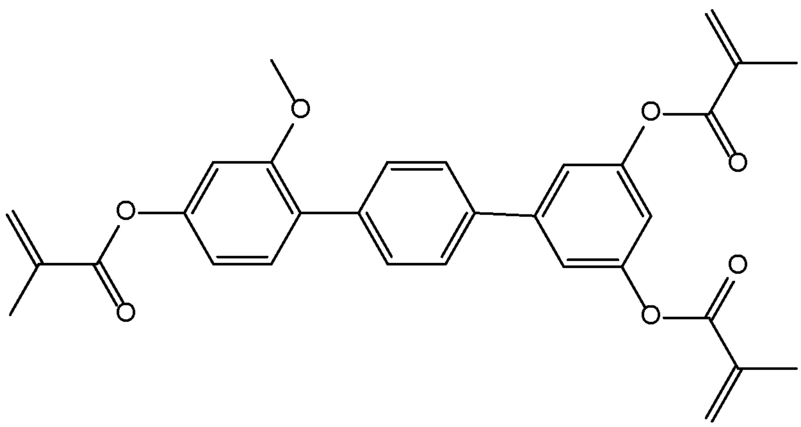

MT-6-5a

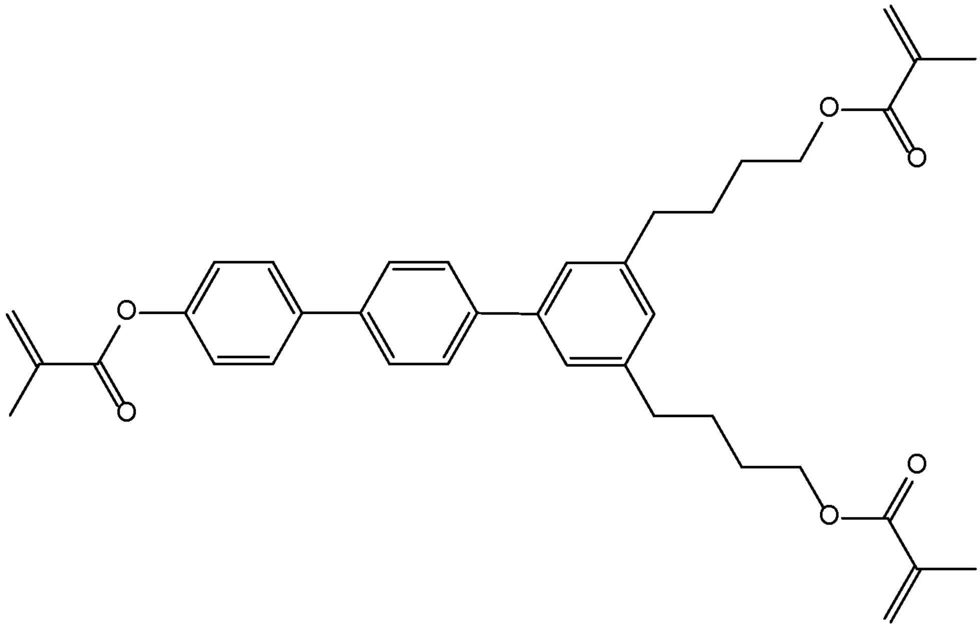

MT-6-7a

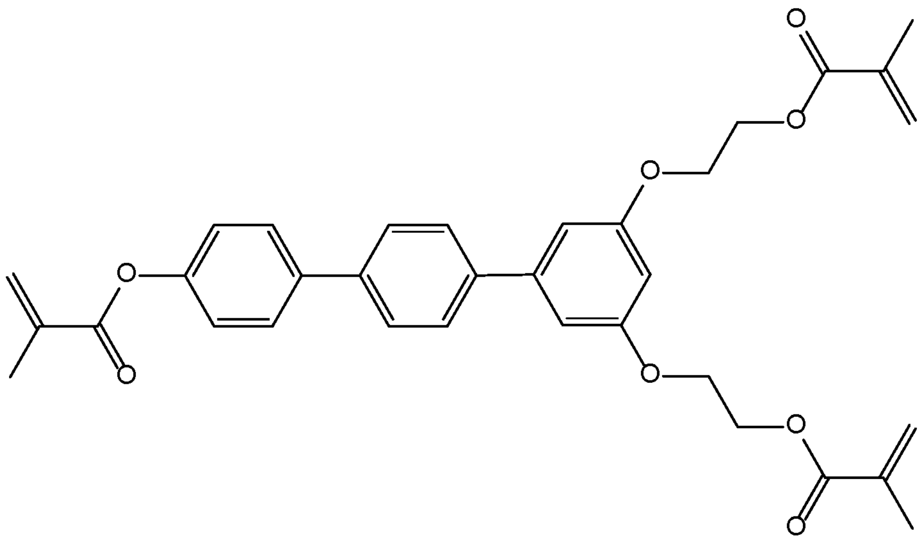

MT-6-7b

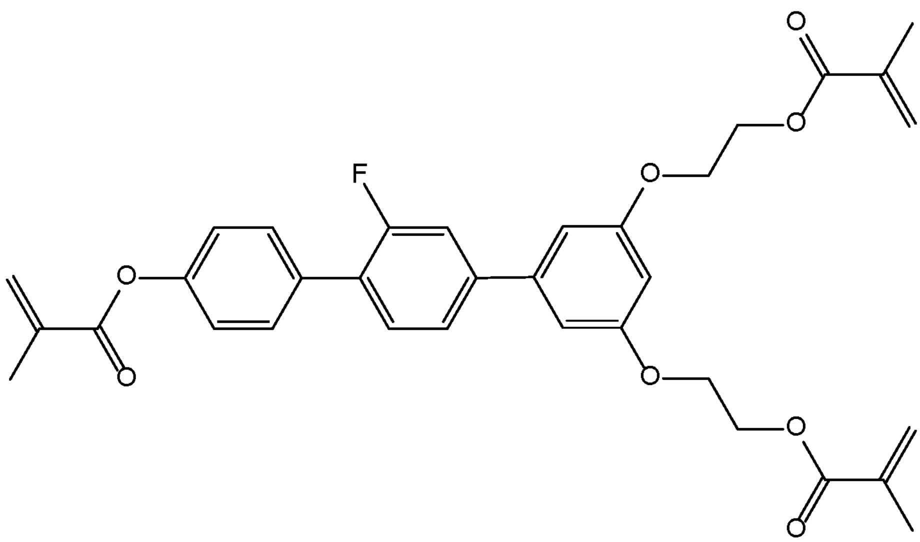

MT-6-8a

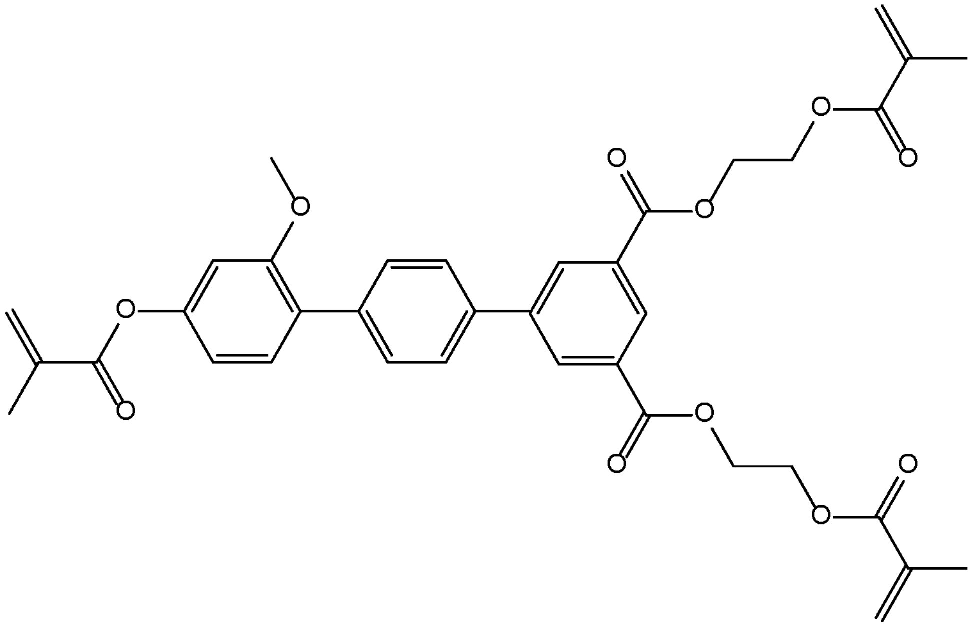

MT-6-11a

**11.** FK-Medium nach einem oder mehreren der Ansprüche 1 bis 10, **dadurch gekennzeichnet, dass** es eine oder mehrere Verbindungen der Formel II enthält, die ausgewählt sind aus der Gruppe bestehend aus Verbindungen der Formeln IIA, IIB, IIC und IID

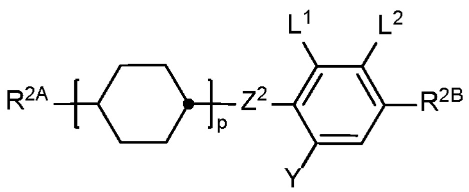

IIA

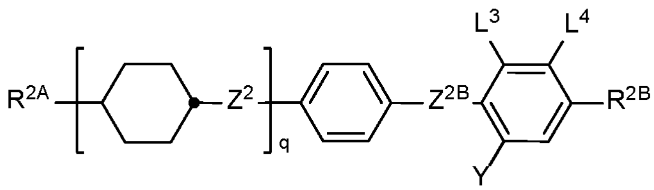

IIB

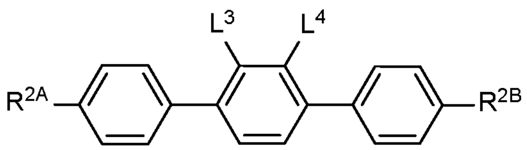

IIC

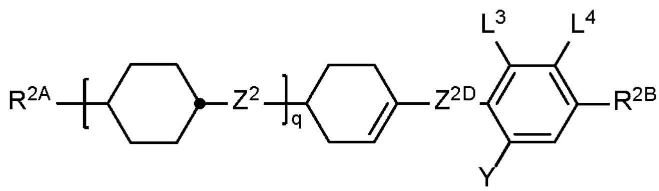

IID

worin

$R^{2A}$ und $R^{2B}$ jeweils unabhängig voneinander H, einen Alkyl- oder Alkenylrest mit bis zu 15 C-Atomen bedeuten,

der unsubstituiert, einfach durch CN oder $CF_3$ substituiert oder mindestens einfach durch Halogen substituiert ist, wobei zusätzlich eine oder mehrere $CH_2$-Gruppen in diesen Resten so durch -O-, -S-,

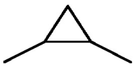, 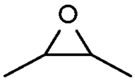, 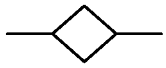, 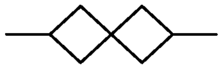,

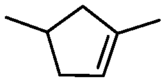, 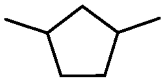,

-C≡C-, $-CF_2O-$, $-OCF_2-$, -OC-O- oder -O-CO- ersetzt sein können, dass O-Atome nicht direkt miteinander verknüpft sind,
$L^1$ bis $L^4$ jeweils unabhängig voneinander F, Cl, $CF_3$ oder $CHF_2$ bedeuten,
Y H, F, Cl, $CF_3$, $CHF_2$ oder $CH_3$, vorzugsweise H oder $CH_3$, besonders bevorzugt H bedeutet,
$Z^2$, $Z^{2B}$ und $Z^{2D}$ jeweils unabhängig voneinander eine Einfachbindung, $-CH_2CH_2-$, -CH=CH-, $-CF_2O-$, $-OCF_2-$, $-CH_2O-$, $-OCH_2-$, -COO-, -OCO-, $-C_2F_4-$, -CF=CF-, $-CH=CHCH_2O-$ bedeuten,
p 0, 1 oder 2 bedeutet und
q bei jedem Auftreten gleich oder verschieden 0 oder 1 bedeutet.

12. FK-Medium nach irgendeinem der Ansprüche 1 bis 11, **dadurch gekennzeichnet, dass** es zusätzlich eine oder mehrere Verbindungen der Formel III

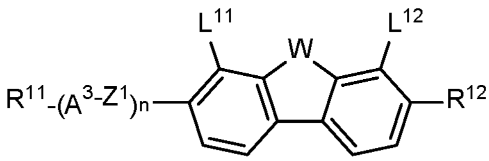

III

enthält, worin

$R^{11}$ und $R^{12}$ jeweils unabhängig voneinander H, einen Alkyl- oder Alkoxyrest mit 1 bis 15 C-Atomen bedeuten, wobei eine oder mehrere $CH_2$-Gruppen in diesen Resten jeweils unabhängig voneinander so durch

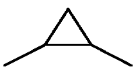, 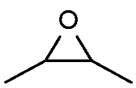, 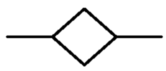, 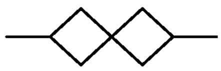,

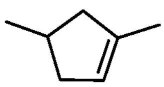, 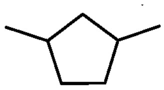,

-O-, -S-, -C≡C-, $-CF_2O-$, $-OCF_2-$, -CH=CH-, -OC-O- oder -O-CO- ersetzt sein können, dass O-Atome nicht direkt miteinander verknüpft sind, und worin zusätzlich ein oder mehrere H-Atome durch Halogen ersetzt sein können,
$A^3$ bei jedem Auftreten unabhängig voneinander

a) 1,4-Cyclohexenylen- oder 1,4-Cyclohexylenrest, worin eine oder zwei nicht benachbarte $CH_2$-Gruppen durch -O- oder -S- ersetzt sein können,
b) einen 1,4-Phenylenrest, worin eine oder zwei CH-Gruppen durch N ersetzt sein können, oder
c) einen Rest, der aus der Gruppe bestehend aus Spiro-[3.3]heptan-2,6-diyl, 1,4-Bicyclo[2.2.2]octylen, Naphthalin-2,6-diyl, Decahydronaphthalin-2,6-diyl, 1,2,3,4-Tetrahydronaphthalin-2,6-diyl, Phenanthren-2,7-diyl und Fluoren-2,7-diyl ausgewählt ist,

bedeutet, bei denen die Reste a), b) und c) ein- oder mehrfach durch Halogenatome substituiert sein können,
n 0, 1 oder 2, vorzugsweise 0 oder 1, bedeutet,

$Z^1$ bei jedem Auftreten unabhängig voneinander -CO-O-, -O-CO-, $-CF_2O-$, $-OCF_2-$, $-CH_2O-$, $-OCH_2-$, $-CH_2-$, $-CH_2CH_2-$, $-(CH_2)_4-$, $-CH=CH-CH_2O-$, $-C_2F_4-$, $-CH_2CF_2-$, $-CF_2CH_2-$, -CF=CF-, -CH=CF-, -CF=CH-, -CH=CH-, -C=C- oder eine Einfachbindung bedeutet,

$L^{11}$ und $L^{12}$ jeweils unabhängig voneinander F, Cl, $CF_3$ oder $CHF_2$, vorzugsweise H oder F, am stärksten bevorzugt F bedeuten, und

W O oder S bedeutet.

**13.** FK-Medium nach irgendeinem der Ansprüche 1 bis 12, **dadurch gekennzeichnet, dass** es zusätzlich eine oder mehrere Verbindungen der Formel IV

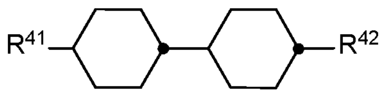

IV

enthält, worin

$R^{41}$ einen unsubstituierten Alkylrest mit 1 bis 7 C-Atomen oder einen unsubstituierten Alkenylrest mit 2 bis 7 C-Atomen, vorzugsweise einen n-Alkylrest, besonders bevorzugt mit 2, 3, 4 oder 5 C-Atomen, bedeutet und

$R^{42}$ einen unsubstituierten Alkylrest mit 1 bis 7 C-Atomen oder einen unsubstituierten Alkoxyrest mit 1 bis 6 C-Atomen, beide vorzugsweise mit 2 bis 5 C-Atomen, einen unsubstituierten Alkenylrest mit 2 bis 7 C-Atomen,vorzugsweise mit 2, 3 oder 4 C-Atomen, stärker bevorzugt einen Vinylrest oder einen 1-Propenylrest und insbesondere einen Vinylrest bedeutet.

**14.** FK-Medium nach irgendeinem der Ansprüche 1 bis 13, **dadurch gekennzeichnet, dass** es zusätzlich eine oder mehrere Verbindungen der Formel V

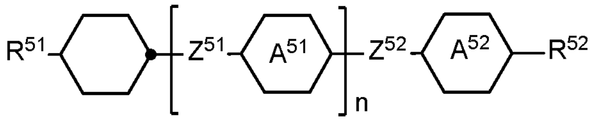

V

enthält, worin

$R^{51}$ und $R^{52}$ unabhängig voneinander eine der für $R^{41}$ und $R^{42}$ genannten Bedeutungen besitzen und vorzugsweise Alkyl mit 1 bis 7 C-Atomen, vorzugsweise n-Alkyl, besonders bevorzugt n-Alkyl mit 1 bis 5 C-Atomen, Alkoxy mit 1 bis 7 C-Atomen, vorzugsweise n-Alkoxy, besonders bevorzugt n-Alkoxy mit 2 bis 5 C-Atomen, Alkoxyalkyl, Alkenyl oder Alkenyloxy mit 2 bis 7 C-Atomen, vorzugsweise mit 2 bis 4 C-Atomen, vorzugsweise Alkenyloxy, bedeuten,

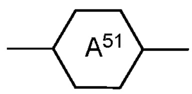 , 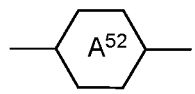

gleich oder verschieden

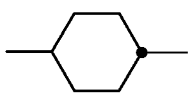 , 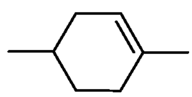 , 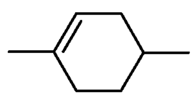 ,

, 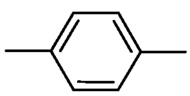 , 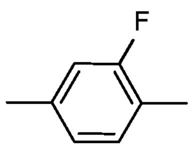 oder 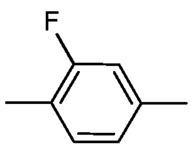

bedeuten, worin

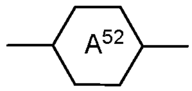

vorzugsweise

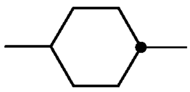 oder 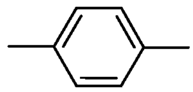

bedeutet,

$Z^{51}$, $Z^{52}$ jeweils unabhängig voneinander $-CH_2-CH_2-$, $-CH_2-O-$, -CH=CH-, -C=C-, -COO- oder eine Einfachbindung, vorzugsweise $-CH_2-CH_2-$, $-CH_2-O-$ oder eine Einfachbindung und besonders bevorzugt eine Einfachbindung bedeuten, und

n 1 oder 2 ist.

**15.** FK-Medium nach irgendeinem der Ansprüche 1 bis 14, **dadurch gekennzeichnet, dass** es zusätzlich einen oder mehrere Zusatzstoffe enthält, die aus der Gruppe bestehend aus Stabilisatoren, chiralen Dotierstoffen, Polymerisationsinitiatoren und Selbstorientierungsadditiven ausgewählt sind.

**16.** Verfahren zur Herstellung eines FK-Mediums nach einem oder mehreren der Ansprüche 1 bis 15, umfassend die Schritte Mischen einer oder mehrerer polymerisierbarer Verbindungen der Formel I wie in einem oder mehreren der Ansprüche 1 bis 6 definiert mit einer oder mehreren Verbindungen der Formel II, III, IV und/oder V wie in einem oder mehreren der Ansprüche 1 oder 9 bis 12 definiert und gegebenenfalls mit einer oder mehreren zusätzlichen polymerisierbaren Verbindungen wie in einem oder mehreren der Ansprüche 7 bis 10 definiert und gegebenenfalls mit weiteren flüssigkristallinen Verbindungen und/oder Zusatzstoffen, und gegebenenfalls Polymerisieren der polymerisierbaren Verbindungen.

**17.** FK-Anzeige enthaltend ein FK-Medium wie in einem oder mehreren der Ansprüche 1 bis 15 definiert.

**18.** FK-Anzeige des Anspruchs 17, bei der es sich um eine PS-VA-, PS-IPS-, PS-FFS, PS-UB-FFS- oder SA-VA-Anzeige handelt.

**19.** FK-Anzeige des Anspruchs 17 oder 18, **dadurch gekennzeichnet, dass** sie zwei Substrate, von denen mindestens eines lichtdurchlässig ist, eine auf jedem Substrat vorgesehene Elektrode oder zwei auf nur einem der Substrate vorgesehene Elektroden und zwischen den Substraten angeordnet eine Schicht eines FK-Mediums nach einem oder mehreren der Ansprüche 1 bis 15 enthält, wobei die polymerisierbaren Verbindungen zwischen den Substraten der Anzeige durch UV-Polymerisation polymerisiert werden.

**20.** Verfahren zur Herstellung einer FK-Anzeige nach Anspruch 19, umfassend die Schritte des Bereitstellens eines FK-Mediums nach einem oder mehreren der Ansprüche 1 bis 15 zwischen den Substraten der Anzeige und Polymerisieren der polymerisierbaren Verbindungen durch Bestrahlung mit UV-Licht, vorzugsweise unter Anlegen einer Spannung an die Elektroden der Anzeige.

**21.** Verfahren nach Anspruch 20, **dadurch gekennzeichnet, dass** das UV-Licht eine Wellenlänge im Bereich von 350 bis <370 nm aufweist.

**22.** Verfahren nach Anspruch 20 oder 21, **dadurch gekennzeichnet, dass** die Bestrahlung mit UV-Licht unter Verwendung einer UV-LED-Leuchte durchgeführt wird.

**Revendications**

**1.** Milieu LC, **caractérisé en ce qu'**il comprend un ou plusieurs composés polymérisables de formule I

$$P\text{-}Sp\text{-}A^a\text{-}(Z^a\text{-}A^b)_z\text{-}R^b \qquad I$$

où les radicaux individuels, indépendamment les uns des autres et à chaque occurrence de manière identique ou différente, revêtent les significations suivantes

$R^b$ P-Sp- ou R,

R F, Cl, -CN ou alkyle à chaîne linéaire, ramifiée ou cyclique ayant de 1 à 25 atomes de C, où un ou plusieurs groupements $CH_2$ non adjacents sont éventuellement remplacés par -O-, -S-, -CO-, -CO-O-, -O-CO-, -O-CO-O-, $CR^0=CR^{00}$-, -C≡C-,

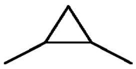, 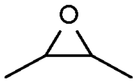, 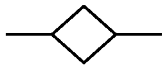, 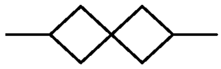,

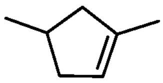, ou 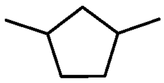,

de telle sorte que les atomes de O et/ou S ne soient pas liés directement les uns aux autres, et où un ou plusieurs atomes de H sont chacun éventuellement remplacés par F ou Cl ou P-Sp-,

P un groupement polymérisable,

Sp un groupement espaceur qui est éventuellement substitué par P, ou une liaison simple,

$A^a$, $A^b$ un groupement alicyclique, hétérocyclique, aromatique ou hétéroaromatique ayant de 4 à 20 atomes de cycle, qui est monocyclique ou polycyclique et qui est éventuellement substitué par un ou plusieurs groupements A, L ou P-Sp-,

$Z^a$ -O-, -S-, -CO-, -CO-O-, -O-CO-, -O-CO-O-, $-OCH_2-$, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -CH=CF-, -CF=CH-, -C≡C-, -CH=CH-CO-O-, -O-CO-CH=CH-, $-CH_2-CH_2-CO-O-$, $-O-CO-CH_2-CH_2-$, $-CR^0R^{00}-$, ou une liaison simple,

$R^0$, $R^{00}$ H ou alkyle ayant de 1 à 12 atomes de C,

A alkyle ayant de 2 à 12, préférablement de 2 à 8, atomes de C, où un ou plusieurs groupements $CH_2$, préférablement non terminaux, sont remplacés par S, de telle sorte que les atomes de S ne soient pas liés directement les uns aux autres,

L F, Cl, -CN, P-Sp- ou alkyle à chaîne linéaire, ramifiée ou cyclique ayant de 1 à 25 atomes de C, où un ou plusieurs groupements $CH_2$ non adjacents sont éventuellement remplacés par -O-, -S-, -CO-, -CO-O-, -O-CO-, -O-CO-O-, $CR^0=CR^{00}$-, -C≡C-,

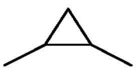, 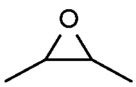, 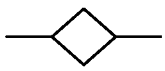, 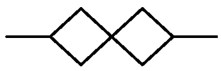,

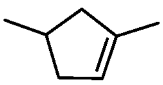, ou 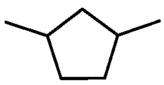,

de telle sorte que les atomes de O et/ou S ne soient pas liés directement les uns aux autres, et où un ou plusieurs atomes de H sont chacun éventuellement remplacés par P-Sp-, F ou Cl,

z 0, 1, 2, 3 ou 4,

n1 1, 2, 3 ou 4,

où les composés de formule I contiennent au moins un groupement $A^a$ ou $A^b$ qui est substitué par au moins un groupement A,

et comprend en outre un ou plusieurs composés de formule II

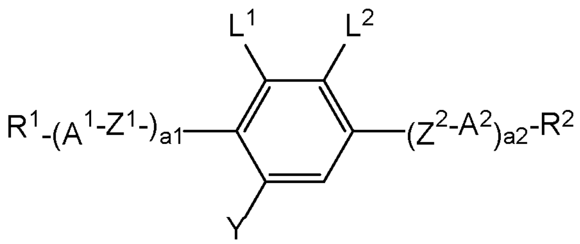

II

où les radicaux individuels, indépendamment les uns des autres et à chaque occurrence de manière identique ou différente, revêtent les significations suivantes

$R^1$, $R^2$ alkyle à chaîne linéaire, ramifiée ou cyclique ayant de 1 à 25 atomes de C, où un ou plusieurs groupements $CH_2$ non adjacents sont éventuellement remplacés par -O-, -S-, -CO-, -CO-O-, -O-CO-, -O-CO-O-, $CR^0$=$CR^{00}$-, -C≡C-,

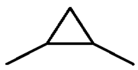,
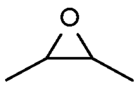,
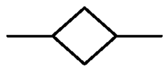,
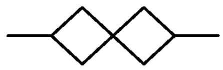,

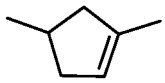, ou 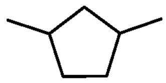,

de telle sorte que les atomes de O et/ou S ne soient pas liés directement les uns aux autres, et où un ou plusieurs atomes de H sont chacun éventuellement remplacés par F ou Cl,

$A^1$, $A^2$ un groupement choisi parmi les formules suivantes

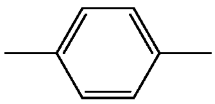
A1

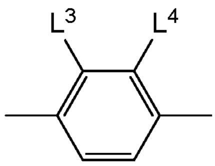
A2

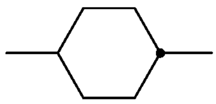
A3

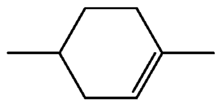
A4

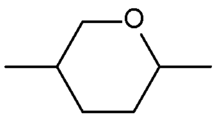
A5

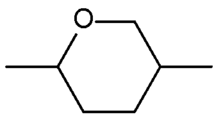
A6

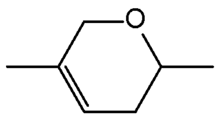
A7

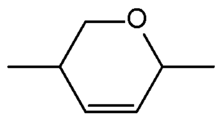
A8

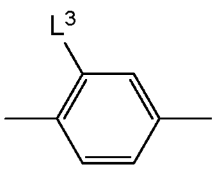
A9

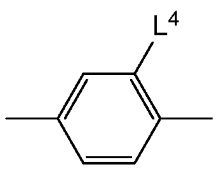
A10

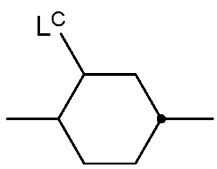
A11

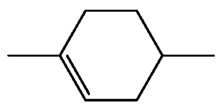
A12

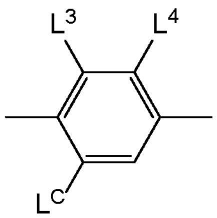

A13

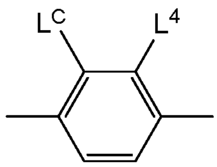

A14

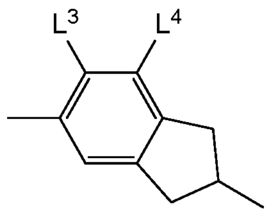

A15

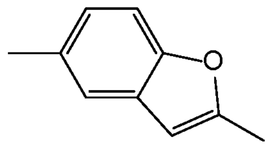

A16

où les radicaux individuels, indépendamment les uns des autres et à chaque occurrence de manière identique ou différente, revêtent les significations suivantes

$Z^1$, $Z^2$ $-CH_2CH_2-$, $-CH=CH-$, $-CF_2O-$, $-OCF_2-$, $-CH_2O-$, $-OCH_2-$, -CO-O-, -O-CO-, $-C_2F_4-$, -CF=CF-, -CH=CH-$CH_2O$- ou une liaison simple,

$L^1$, $L^2$, $L^3$, $L^4$ F, Cl, $OCF_3$, $CF_3$, $CH_3$, $CH_2F$ ou $CHF_2$,

Y H, F, Cl, $CF_3$, $CHF_2$ ou $CH_3$,

$L^C$ $CH_3$ ou $OCH_3$,

a1 1 ou 2,

a2 0 ou 1.

**2.** Milieu LC selon la revendication 1, **caractérisé en ce que** le groupement A dans la formule I désigne thioalkyle ayant de 1 à 7 atomes de C.

**3.** Milieu LC selon la revendication 1 ou 2, **caractérisé en ce que** le groupement A dans la formule I désigne $SCH_3$.

**4.** Composé selon l'une quelconque des revendications 1 à 3, **caractérisé en ce que** les composés de formule I sont choisis parmi les sous-formules suivantes :

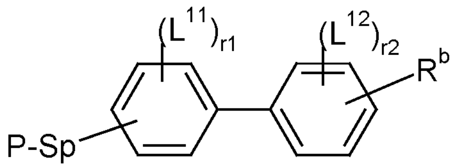

I1

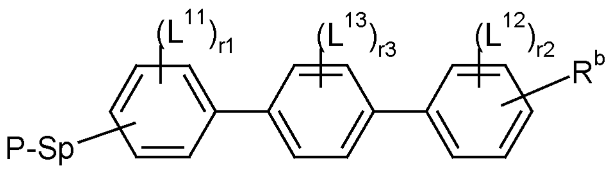

I2

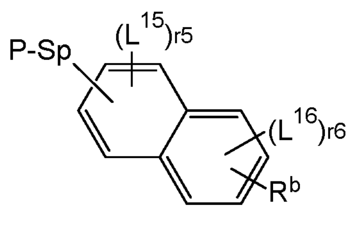

I3

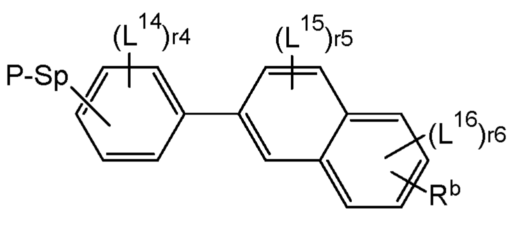

I4a

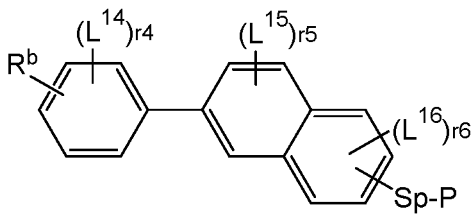

I4b

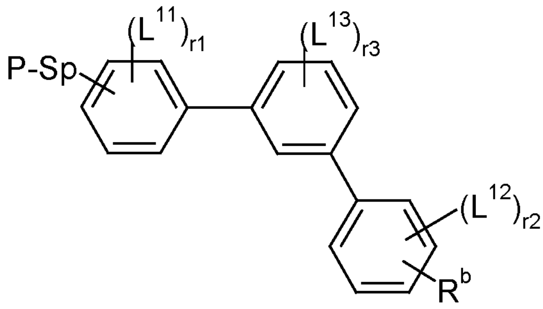

I5

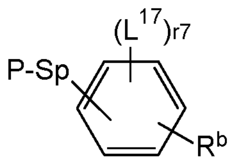

I6

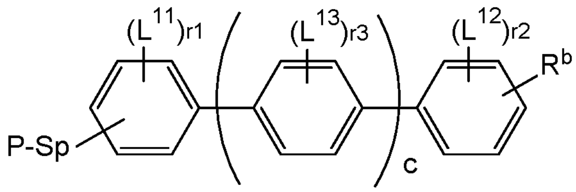

I12

dans lesquelles les radicaux individuels, indépendamment les uns des autres, et à chaque occurrence de manière identique ou différente, revêtent les significations suivantes

A, P, Sp, $R^b$ l'une des significations données selon la revendication 1, 2 ou 3,
$L^{11}$ à $L^{17}$ L ou A,
r1, r2, r3, r4 0, 1, 2, 3 ou 4, où dans la formule I1, I2 et I5 r1+r2+r3 $\geq$1, et dans la formule I12 r1+r2+r3 $\geq$,
r5, r6, 0, 1, 2 ou 3, où dans la formule I3 r5+r6 $\geq$1 et dans la formule I4a et I4b r4+r5+r6$\geq$1,
r7 1, 2, 3 ou 4,
c 0, 1 ou 2,

où les composés contiennent au moins un groupement $L^{11}$ à $L^{17}$ qui est A.

**5.** Milieu LC selon l'une quelconque des revendications 1 à 4, **caractérisé en ce que** les composés de formule I sont choisis parmi les sous-formules suivantes :

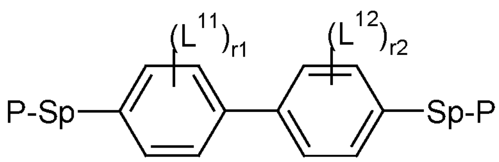

I1A

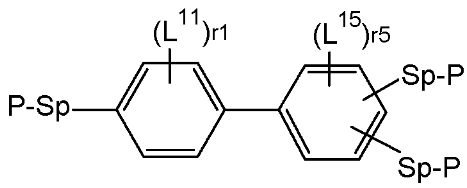
I1B

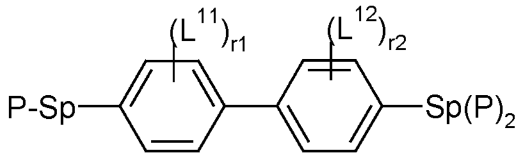
I1C

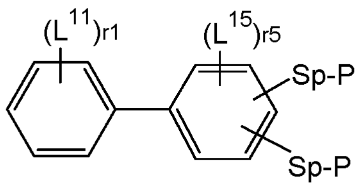
I1D

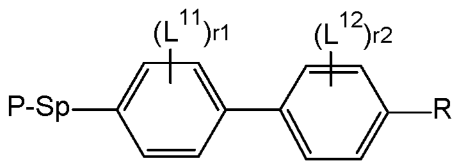
I1E

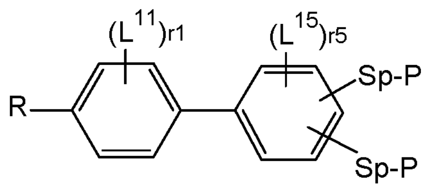
I1F

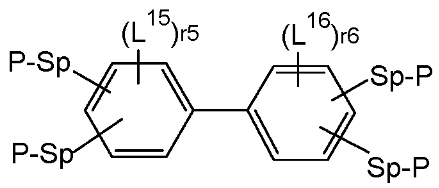
I1G

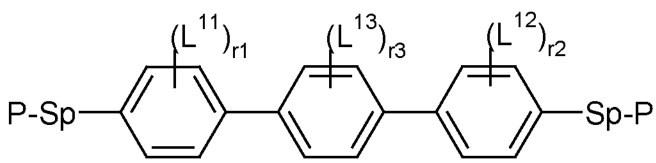
I2A

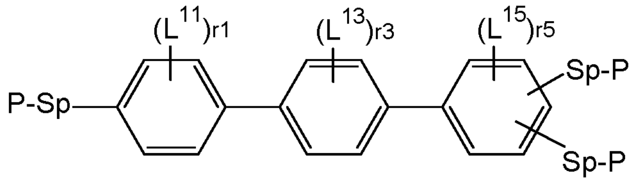
I2B

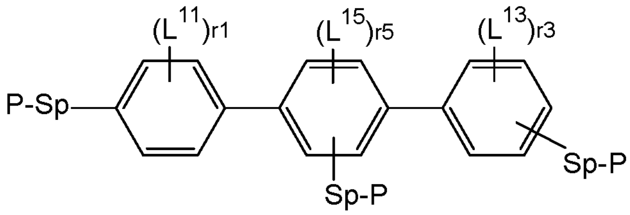

I2C

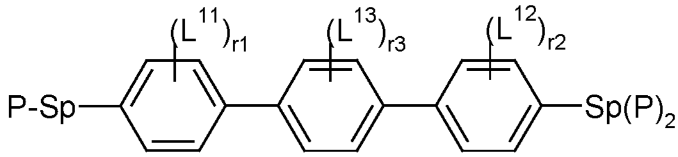

I2D

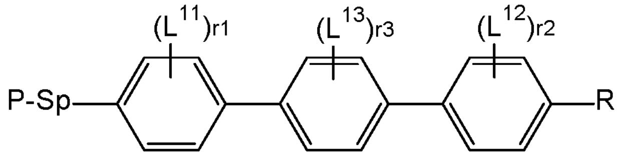

I2E

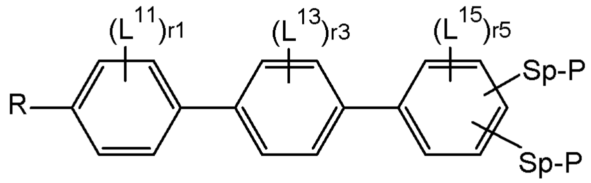

I2F

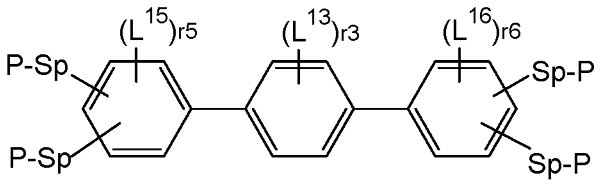

I2G

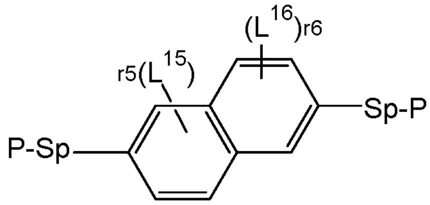

I3A

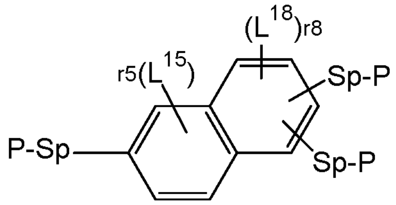

I3B

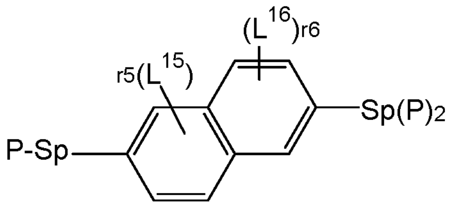

I3C

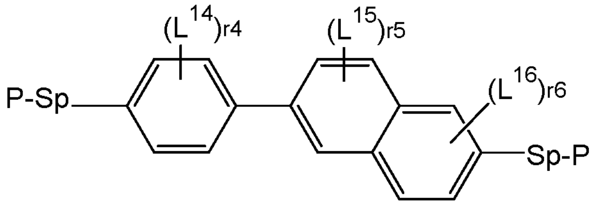

I4A

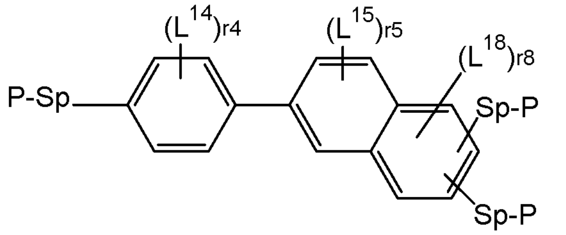

I4B

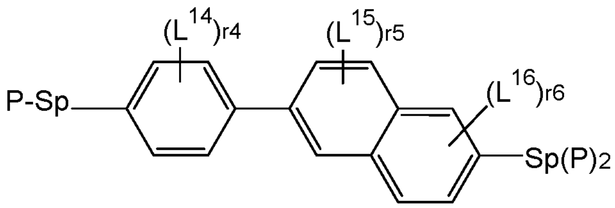

I4C

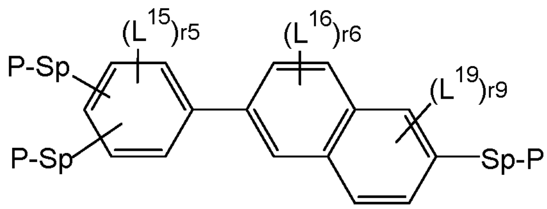

I4D

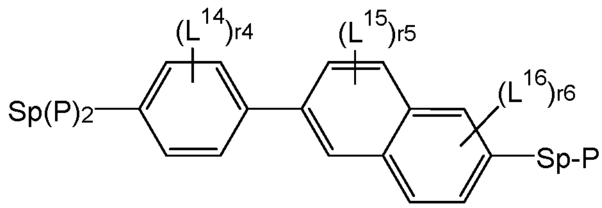

I4E

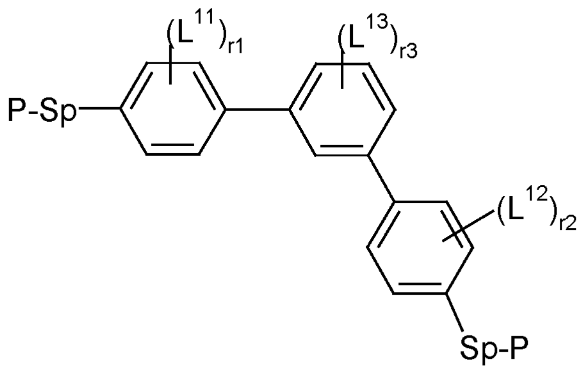

I5A

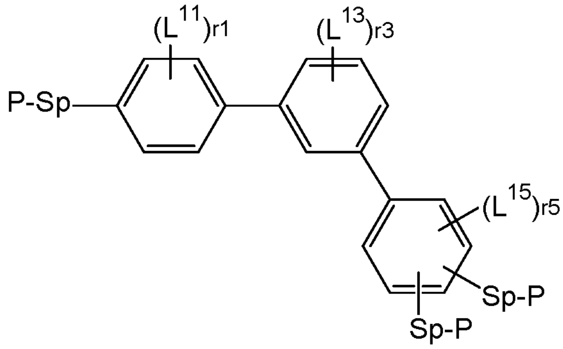

I5B

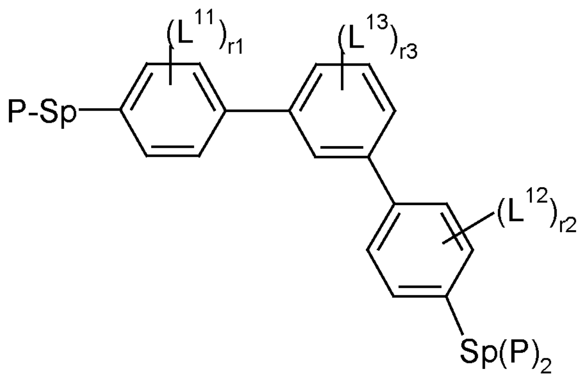

I5C

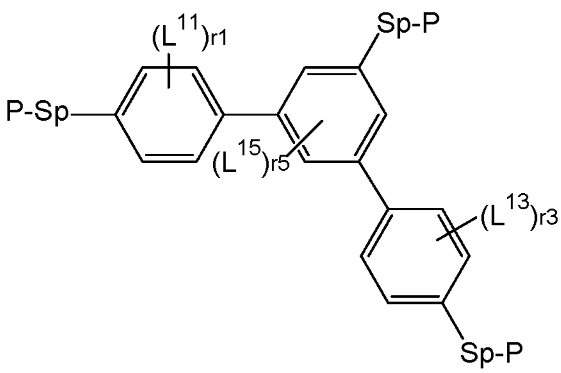

I5D

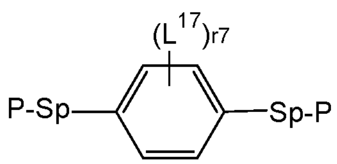

I6A

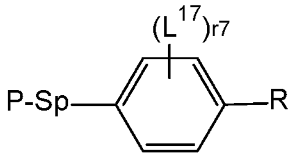

I6B

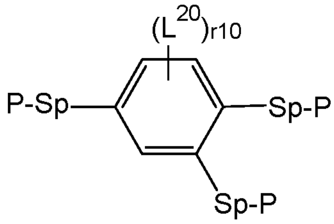

I6C

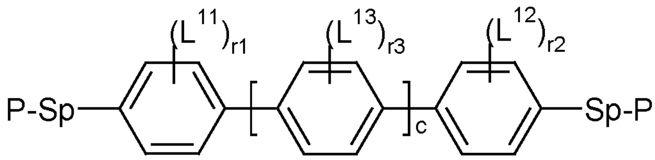

I12A

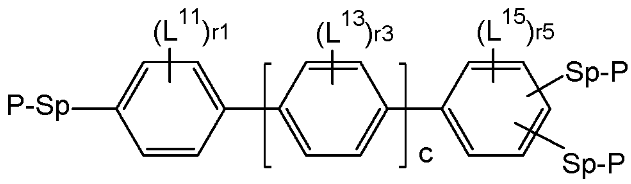

I12B

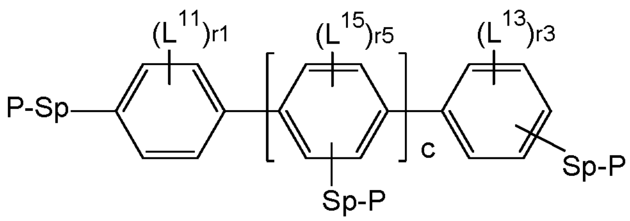

I12C

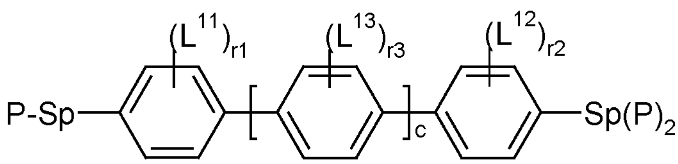

I12D

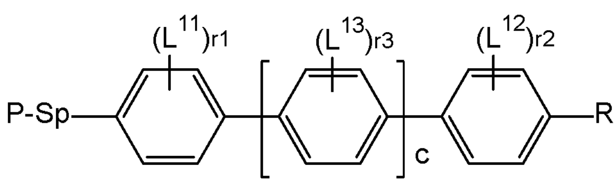

I12E

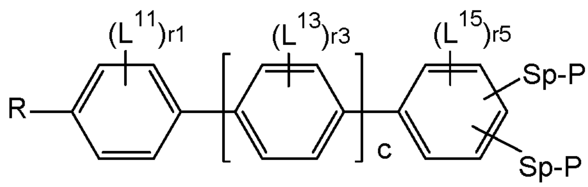

I12F

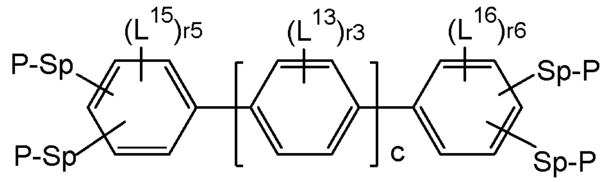

I12G

dans lesquelles

R, P, Sp, $L^{11-17}$ et r1-r7 revêtent les significations données selon l'une quelconque des revendications 1 à 5, $L^{18}$, $L^{19}$ et $L^{20}$ revêtent l'une des significations données pour $L^{11}$,
r8 vaut 0, 1 ou 2,
r9 vaut 0, 1, 2 ou 3,
r10 vaut 1, 2 ou 3,
c vaut 0, 1 ou 2,
$Sp(P)_2$ désigne un groupement espaceur Sp qui est substitué par deux groupements polymérisables P au niveau de positions identiques ou différentes,
et où
dans les formules I1A, I1C et I1E r1+r2 ≥1,
dans la formule I1B, I1D et I1F r1+r5 ≥1,
dans la formule I1G, I3A et I3C r5+r6 ≥1,
dans les formules I2A, I2D, I2E, I5A et I5C r1+r2+r3 ≥1,
dans les formules I2B, I2C, I2F, I5B et I5D r1 +r3+r5 ≥1,
dans la formule I2G r3+r5+r6 ≥1,
dans la formule I4A, I4C et I4E r4+r5+r6 ≥1,
dans la formule I4D r5+r6+r9 ≥1,
dans la formule I3B r5+r8 ≥1,
dans la formule I4B r4+r5+r8 ≥1,
dans les formules I12A, I12D et I12E r1+r2+r3 ≥1,
dans les formules I12B, I12C et I12F r1+r3+r5 ≥1,
dans la formule I12G r3+r5+r6 ≥1,
et où les composés contiennent au moins un groupement $L^{11}$ à $L^{20}$ qui désigne A.

6. Milieu LC selon l'une quelconque des revendications 1 à 5, **caractérisé en ce que** les composés de formule I sont choisis parmi les sous-formules suivantes :

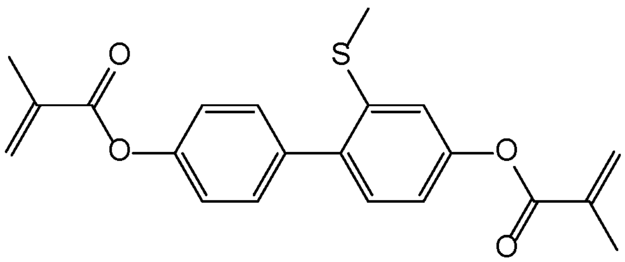

I1A-1-1a

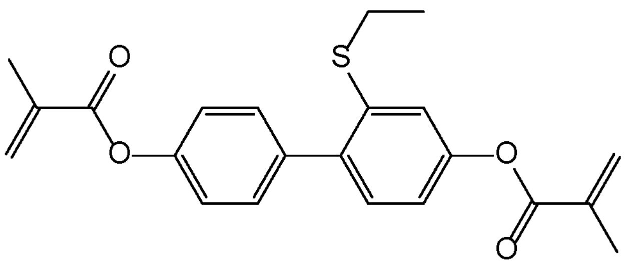

I1A-1-1b

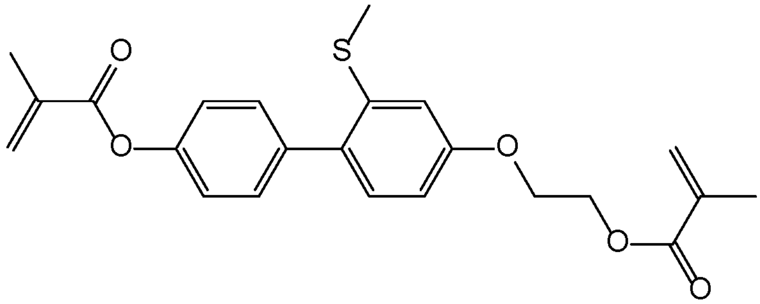

I1A-1-1c

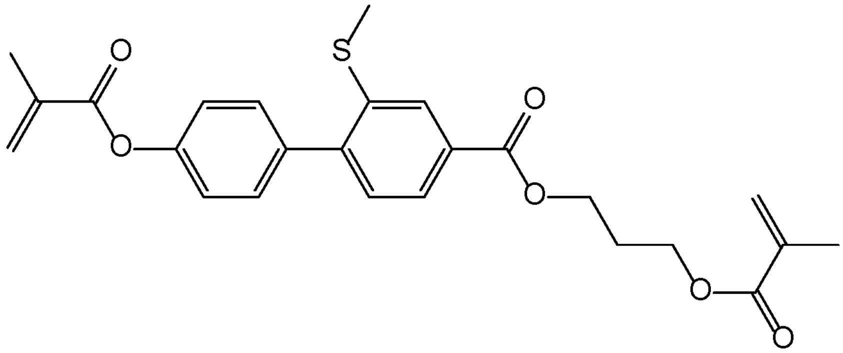

I1A-1-1d

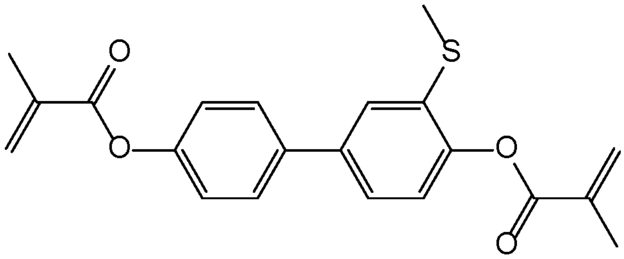

I1A-1-2a

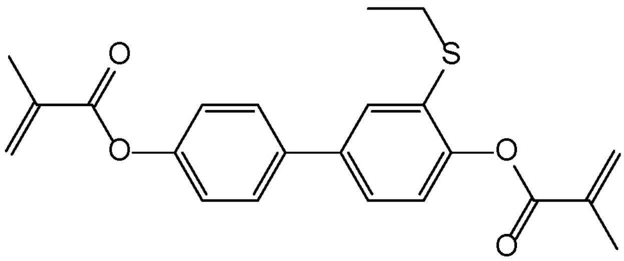

I1A-1-2b

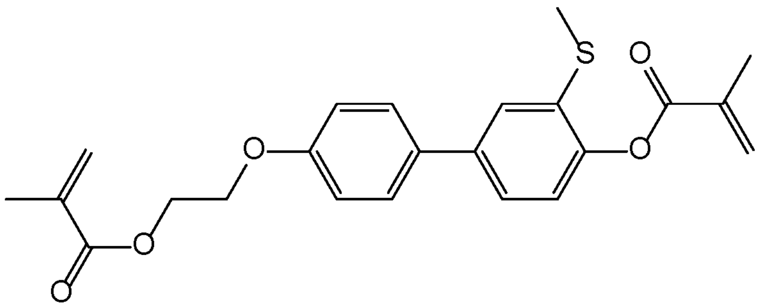

I1A-1-2c

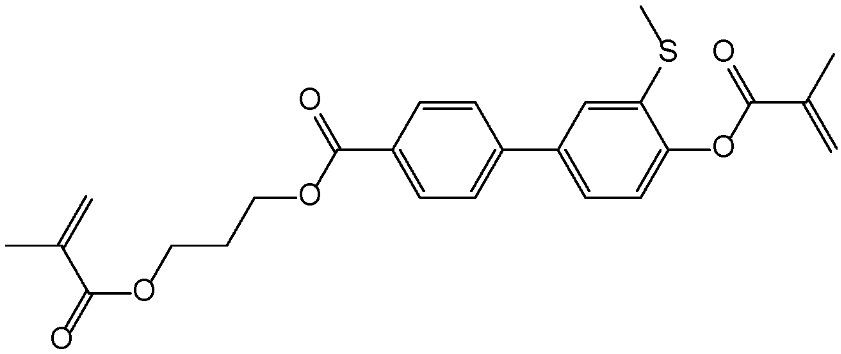

I1A-1-2d

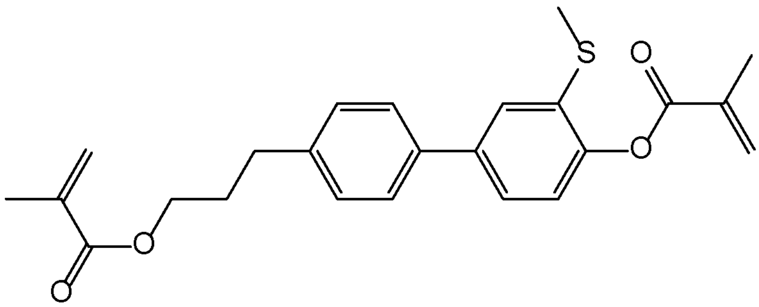

I1A-1-2e

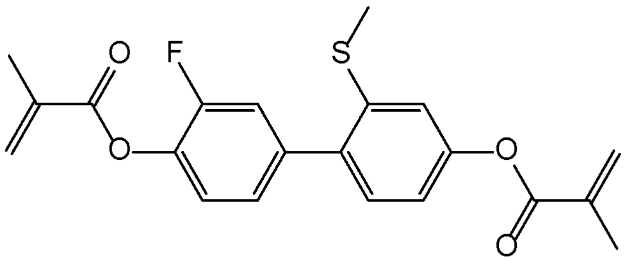

I1A-2-1a

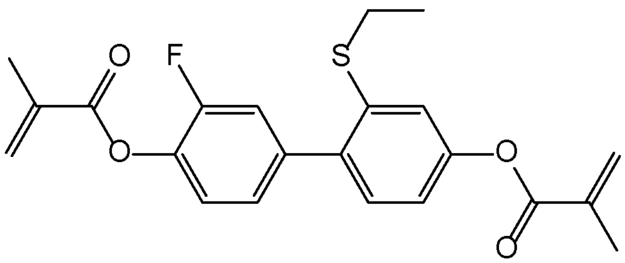

I1A-2-1b

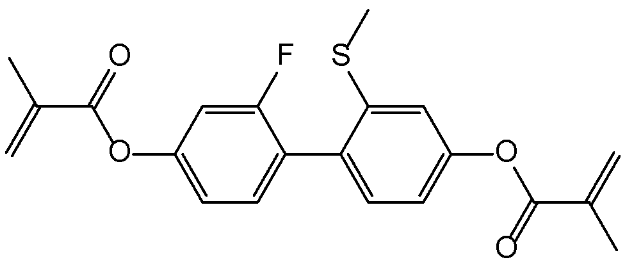

I1A-2-2a

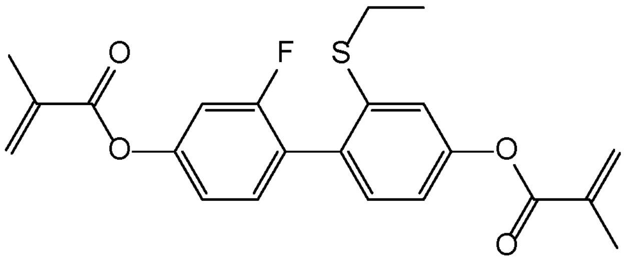

I1A-2-2b

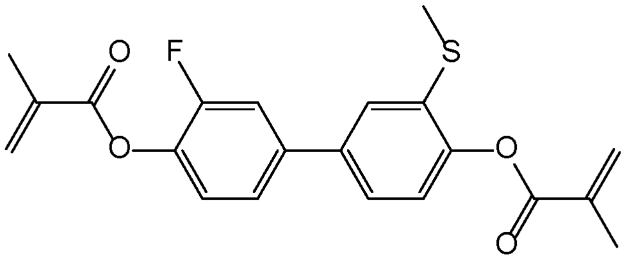

I1A-2-3a

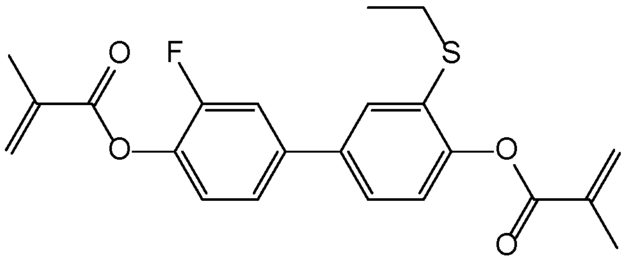

I1A-2-3b

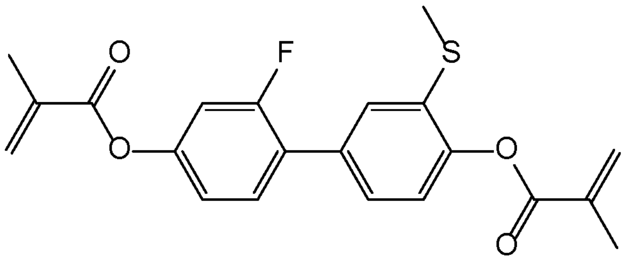

I1A-2-4a

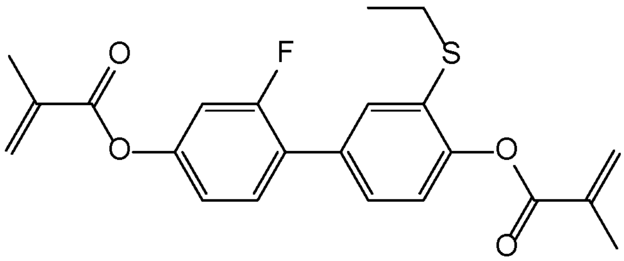

I1A-2-4b

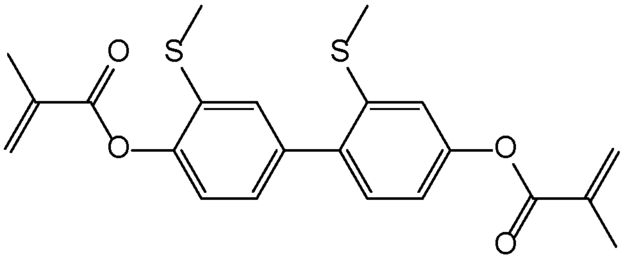

I1A-4-1a

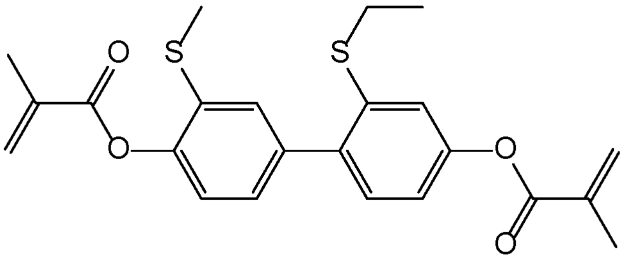

I1A-4-1b

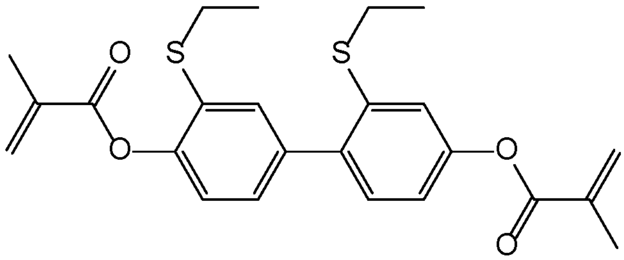

I1A-4-1c

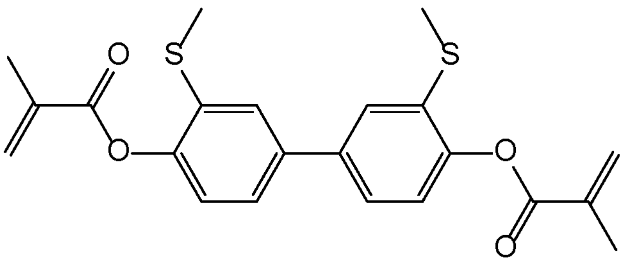

I1A-4-2a

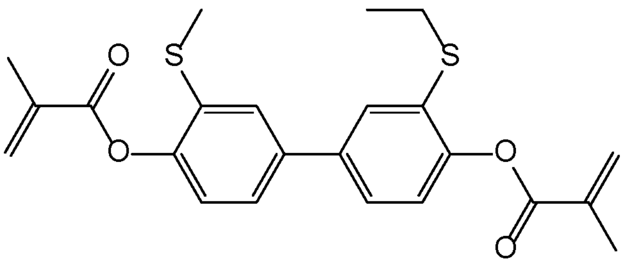

I1A-4-2b

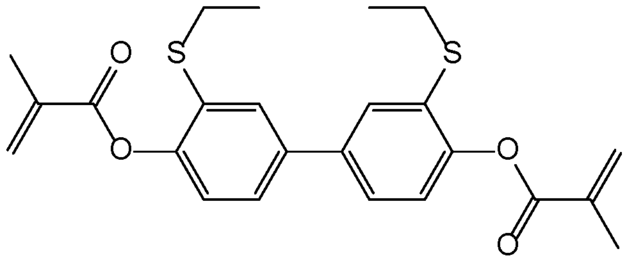

I1A-4-2c

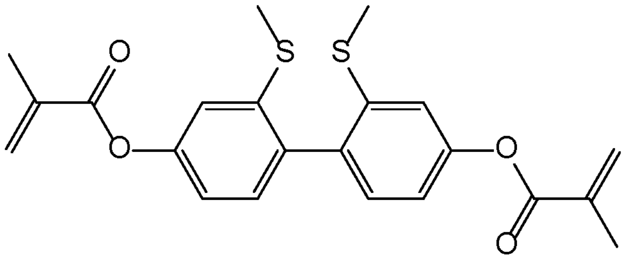

I1A-4-3a

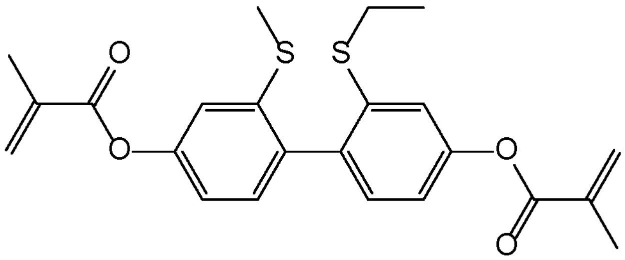

I1A-4-3b

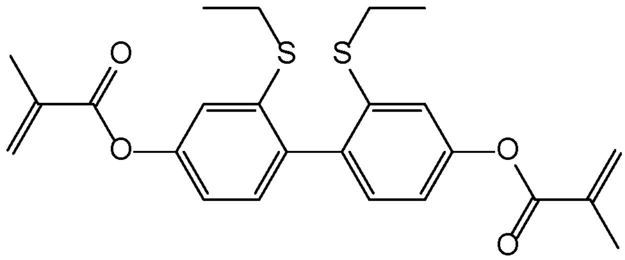

I1A-4-3c

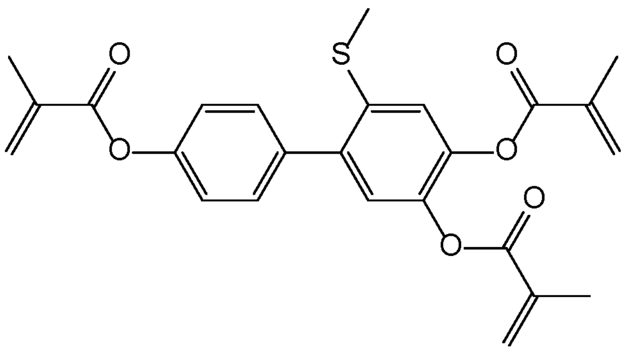

I1B-1-1a

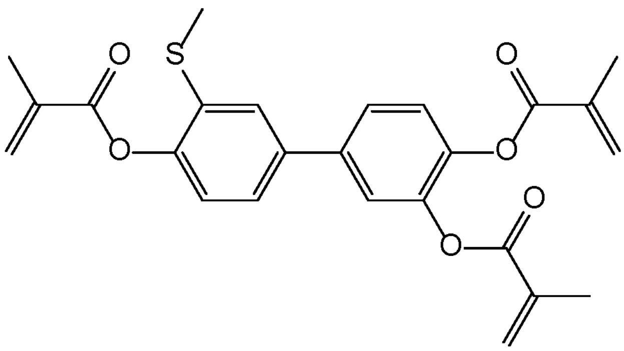

I1B-2-1a

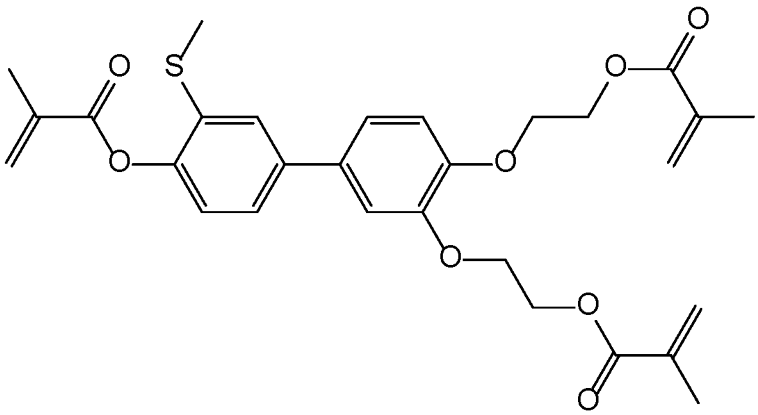

I1B-2-1b

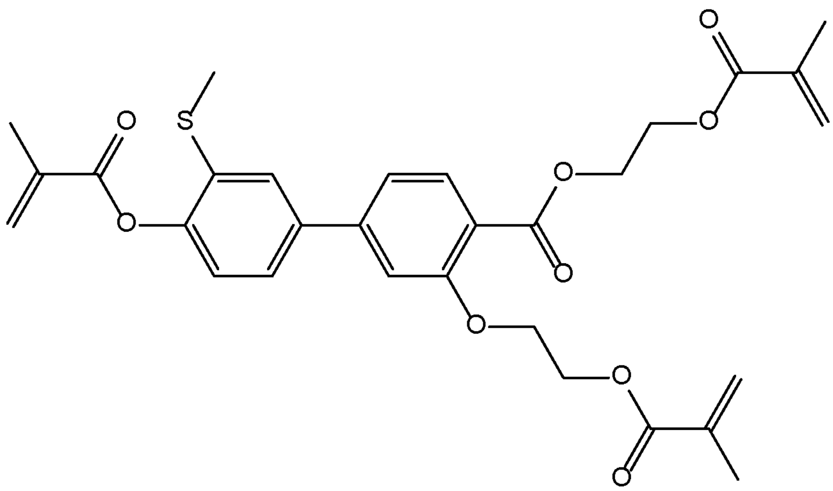

I1B-2-1c

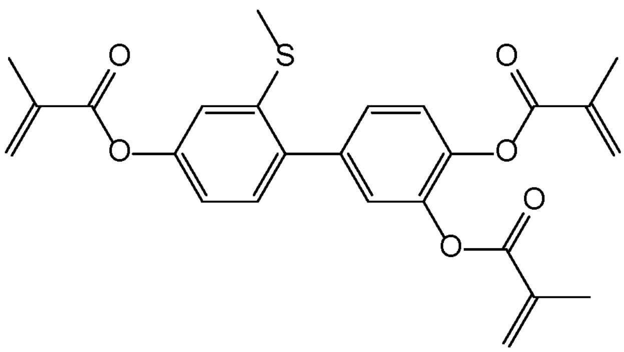

I1B-2-2a

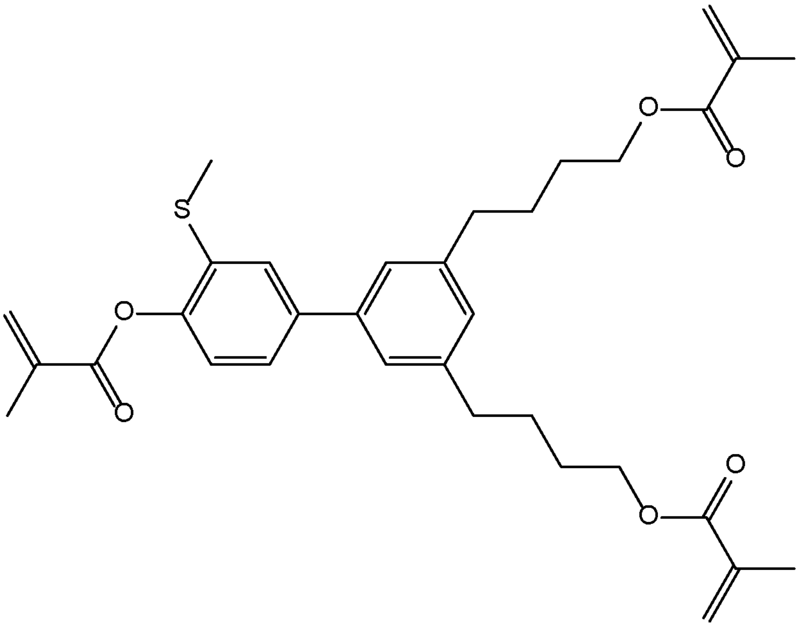

I1B-2-3a

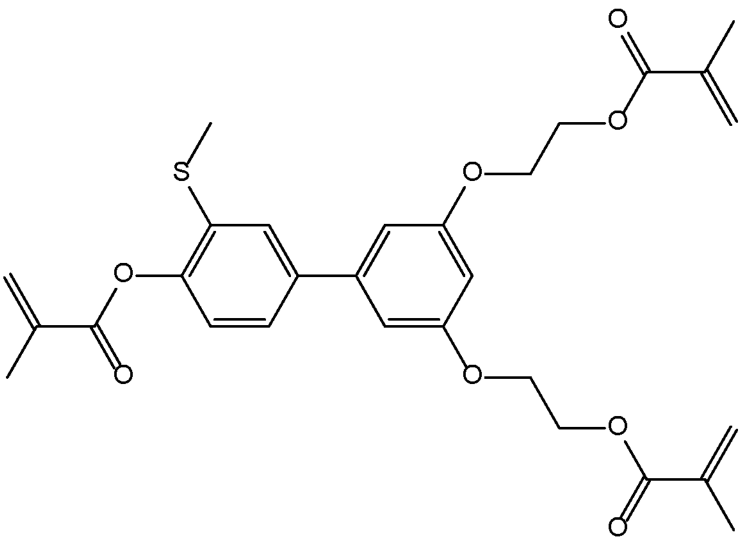

I1B-2-3b

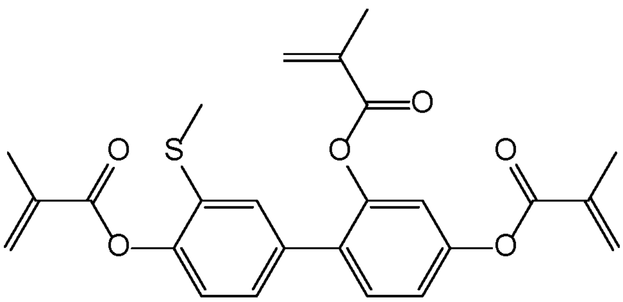

I1B-2-5a

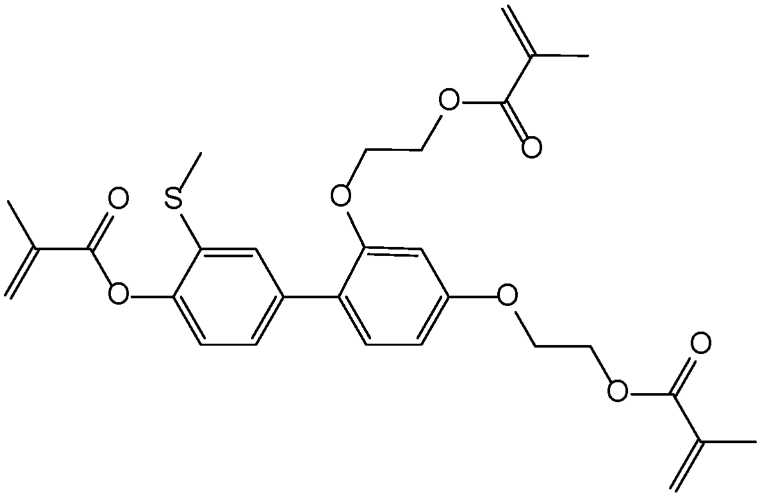

I1B-2-5b

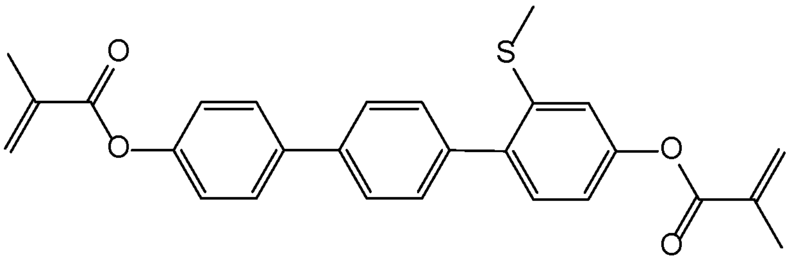

I2A-1-1a

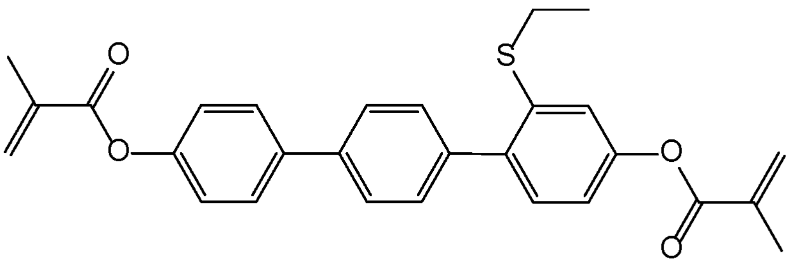

I2A-1-1b

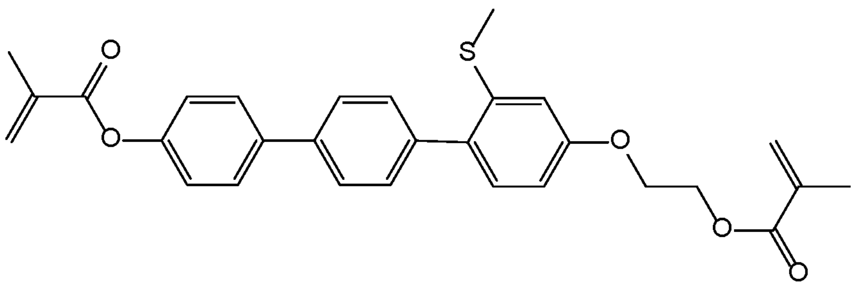

I2A-1-1c

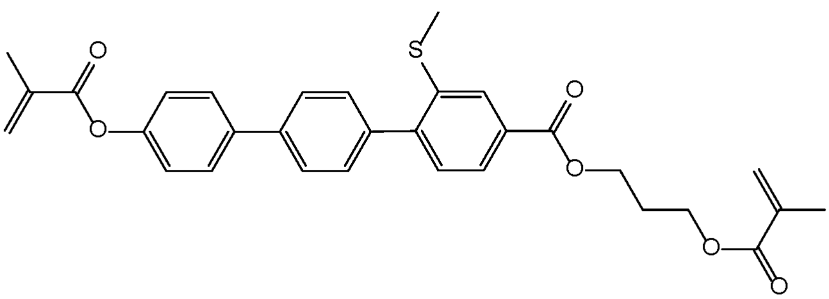

I2A-1-1d

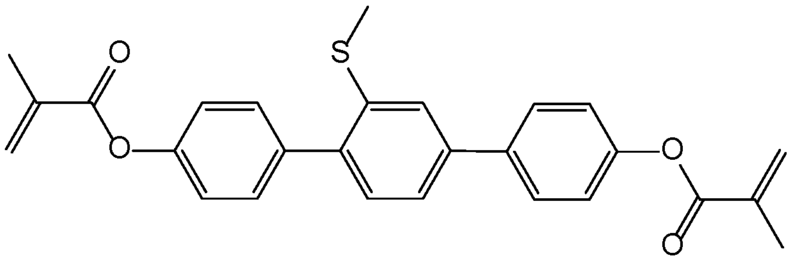

I2A-2-1a

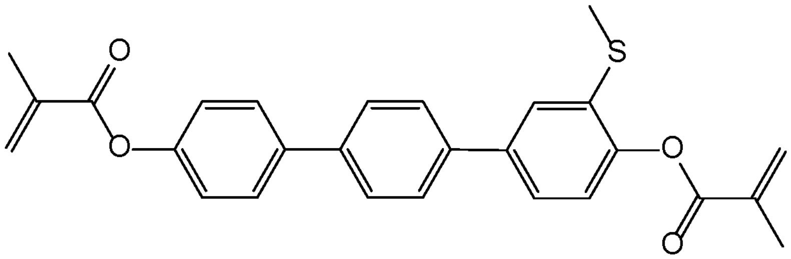

I2A-2-2a

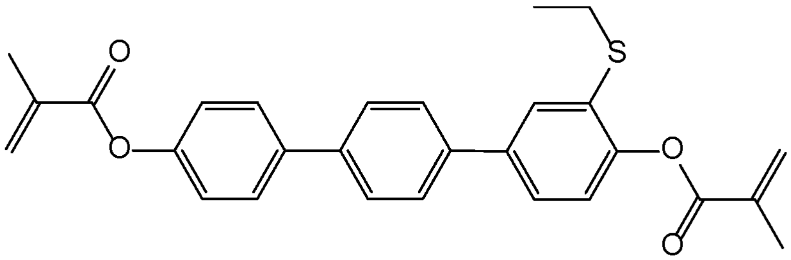

I2A-2-2b

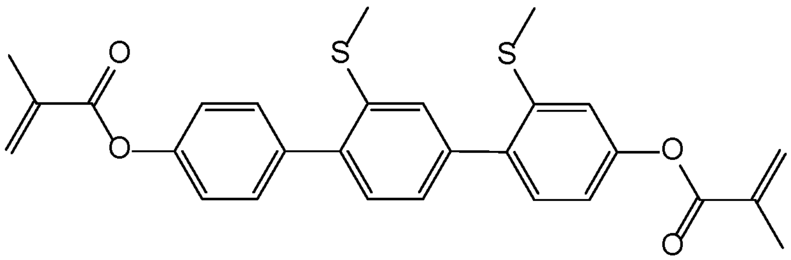

I2A-3-1a

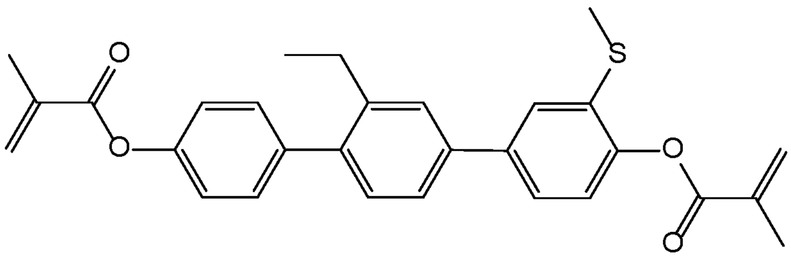

I2A-3-3a

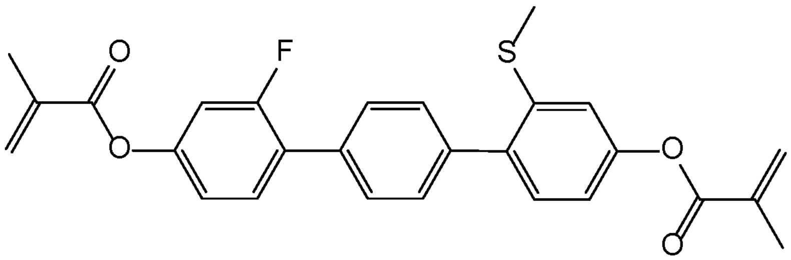

I2A-5-3a

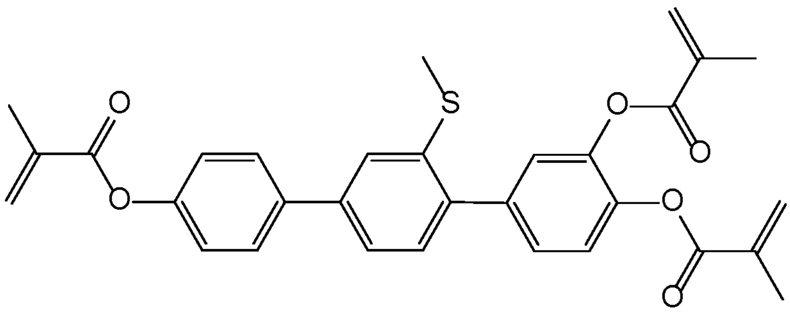

I2B-1-1a

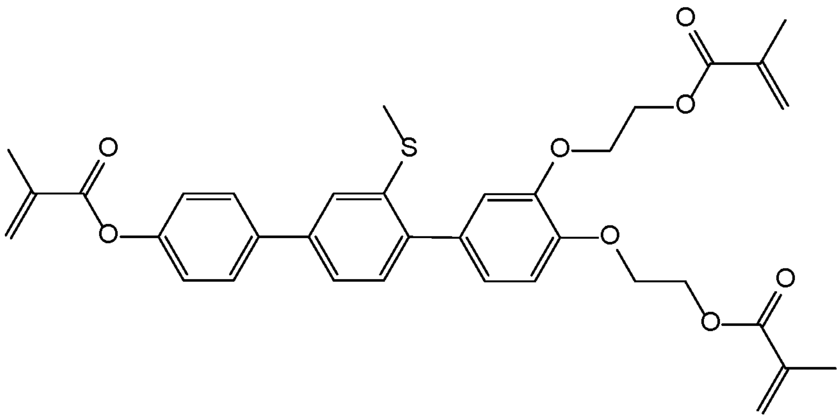

I2B-1-1b

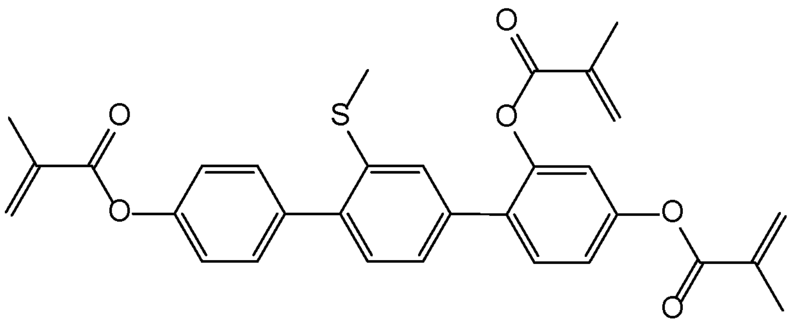

I2B-1-6a

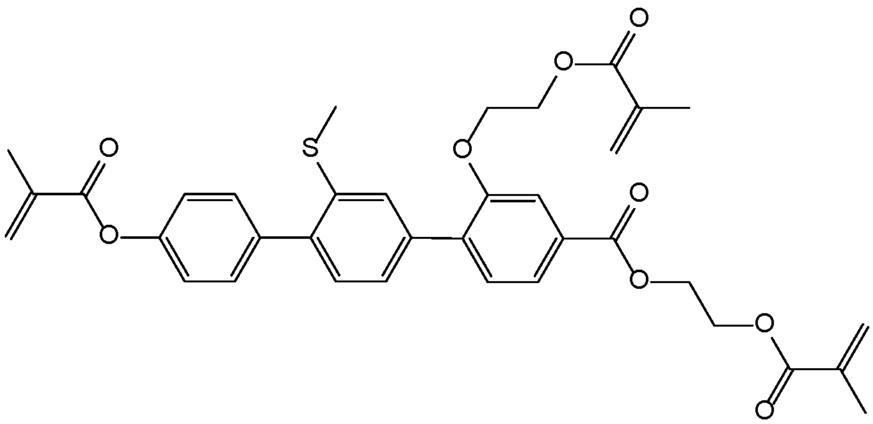

I2B-1-6b

7. Milieu LC selon l'une ou plusieurs parmi les revendications 1 à 6, **caractérisé en ce qu'**il comprend un ou plusieurs autres composés polymérisables choisis parmi les formules suivantes :

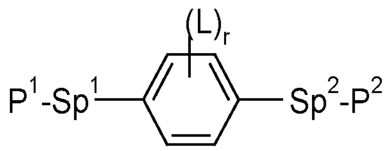

M1

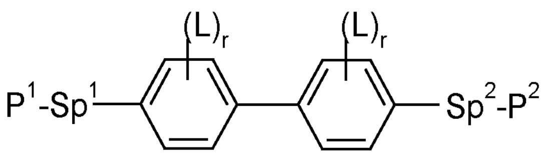

M2

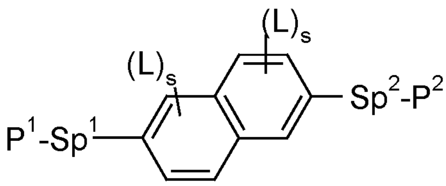

M3

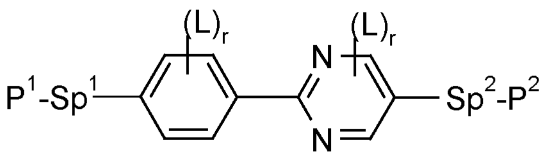

M4

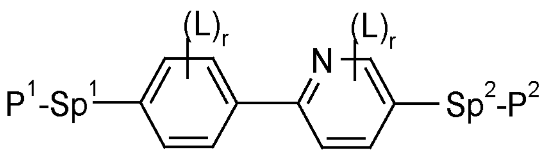

M5

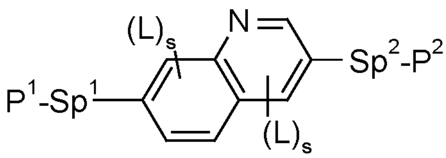

M6

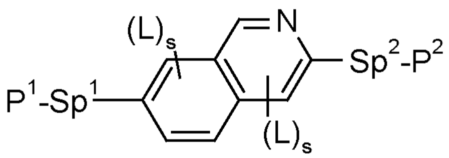

M7

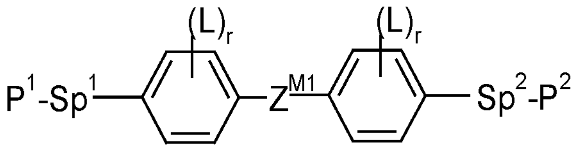

M8

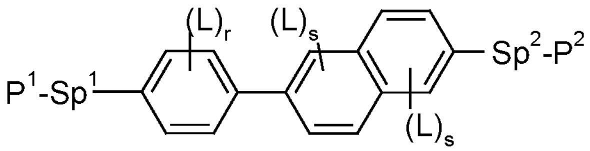

M9

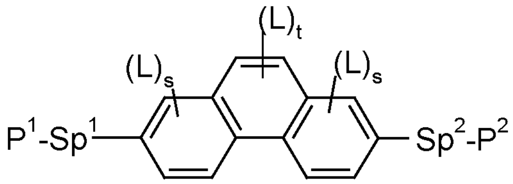

M10

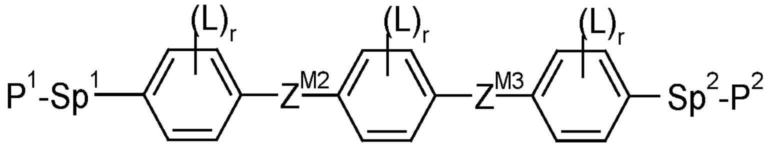

M11

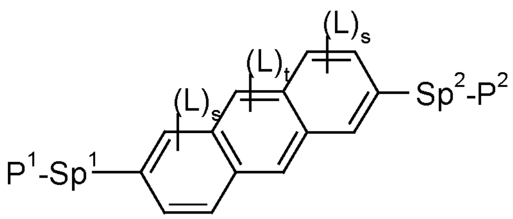

M12

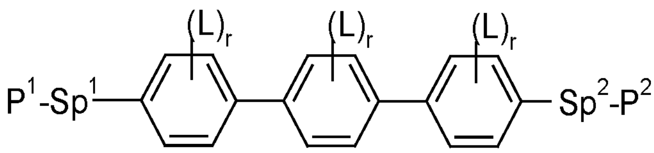

M13

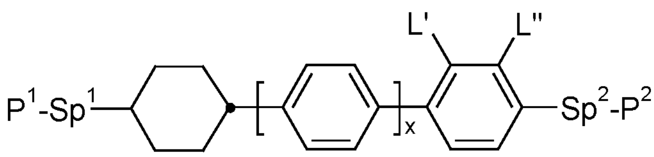

M14

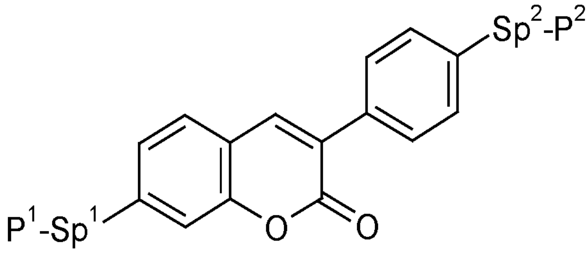

M15

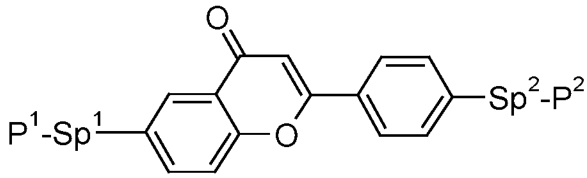

M16

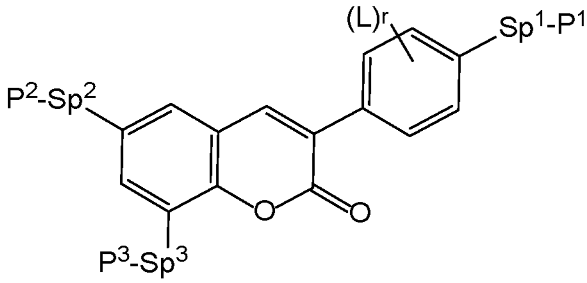

M17

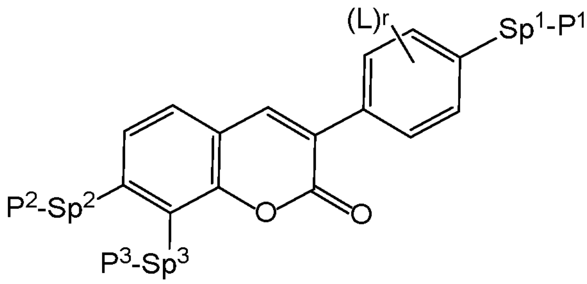

M18

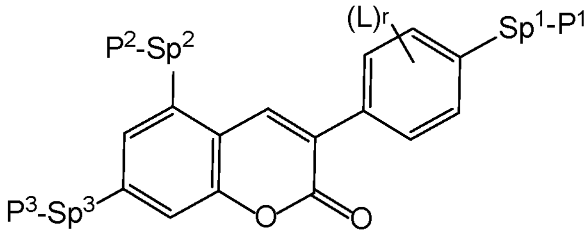

M19

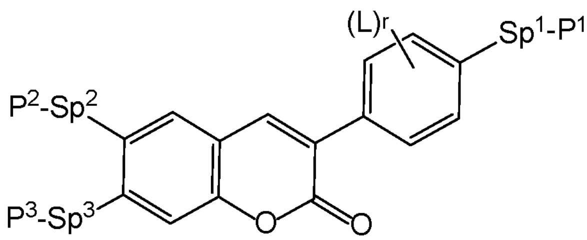

M20

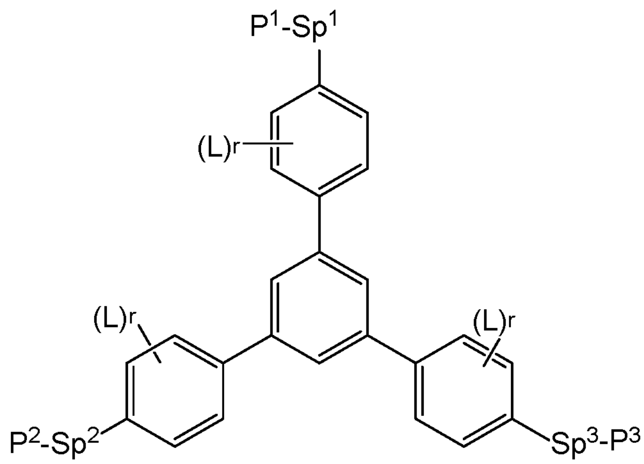

M21

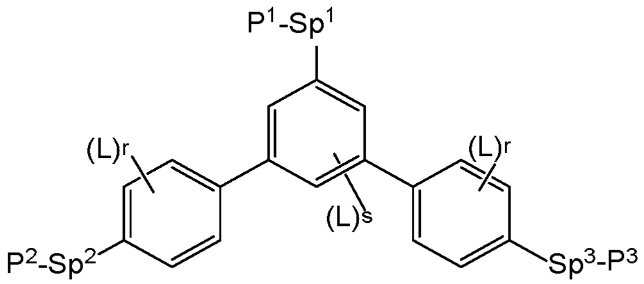

M22

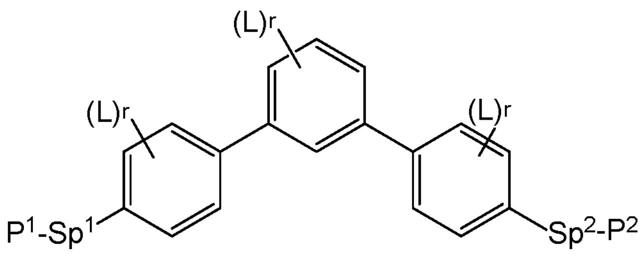

M23

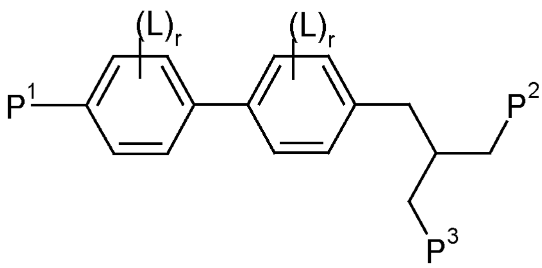

M24

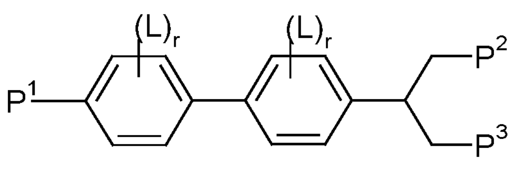

M25

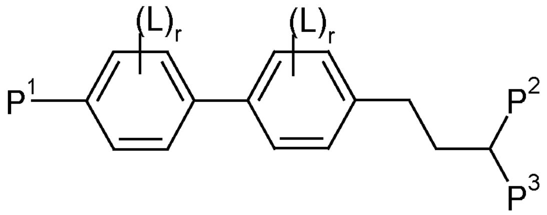

M26

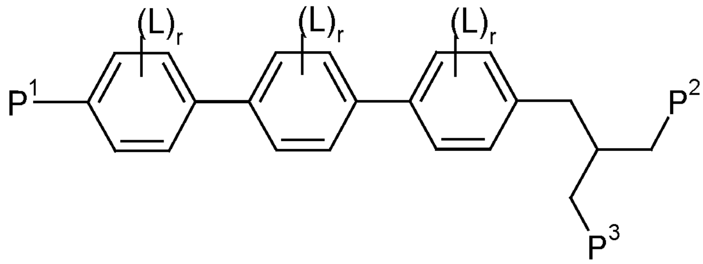

M27

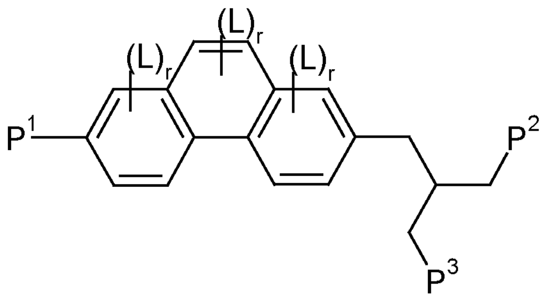

M28

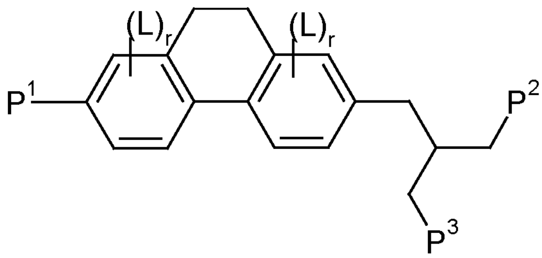

M29

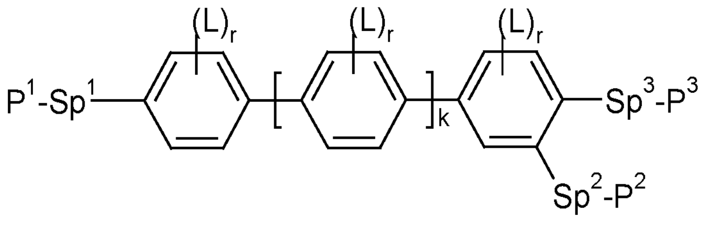

M30

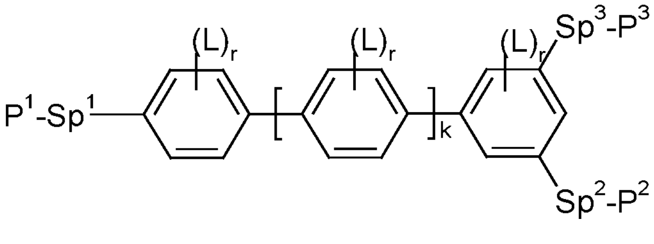

M31

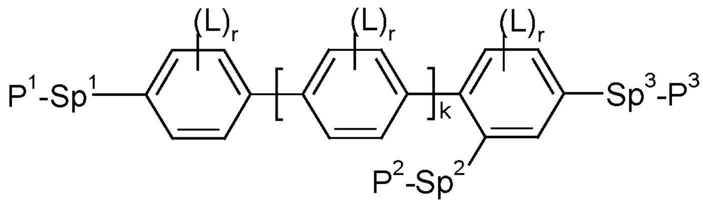

M32

dans lesquelles les radicaux individuels, à chaque occurrence de manière identique ou différente, et chacun, indépendamment les uns des autres, revêtent la signification suivante :

$P^1$, $P^2$, $P^3$ un groupement polymérisable, préférablement choisi parmi vinyloxy, acrylate, méthacrylate, fluoroacrylate, chloroacrylate, oxétane et époxy,

$Sp^1$, $Sp^2$, $Sp^3$ une liaison simple ou un groupement espaceur où, de plus, un ou plusieurs parmi les radicaux $P^1$-$Sp^1$-, $P^2$-$Sp^2$- et $P^3$-$Sp^3$- peuvent désigner $R^{aa}$, à condition qu'au moins l'un des radicaux $P^1$-$Sp^1$-, $P^2$-$Sp^2$ et $P^3$-$Sp^3$- présent soit autre que $R^{aa}$, préférablement $-(CH_2)_{p1}-$, $-(CH_2)_{p1}-O-$, $-(CH_2)_{p1}-CO-O-$ ou $-(CH_2)_{p1}-O-CO-O-$, où p1 est un nombre entier allant de 1 à 12,

$R^{aa}$ H, F, Cl, CN ou alkyle à chaîne linéaire ou ramifiée ayant de 1 à 25 atomes de C, où, de plus, un ou plusieurs groupements $CH_2$ non adjacents peuvent chacun être remplacés, indépendamment les uns des autres, par $-C(R^0)=C(R^{00})-$, -C≡C-, -N(R°)-, -O-, -S-, -CO-, -CO-O-, -O-CO-, -O-CO-O- de telle sorte que les atomes de O et/ou S ne soient pas liés directement les uns aux autres, et où, de plus, un ou plusieurs atomes de H peuvent être remplacés par F, Cl, CN ou $P^1$-$Sp^1$-, particulièrement préférablement alkyle, alcoxy, alcényle, alcynyle, alkylcarbonyle, alcoxycarbonyle, alkylcarbonyloxy ou alcoxycarbonyloxy à chaîne linéaire ou ramifiée, éventuellement mono- ou polyfluoré, ayant de 1 à 12 atomes de C (où les radicaux alcényle et alcynyle possèdent au moins deux atomes de C et les radicaux ramifiés possèdent au moins trois atomes de C), et où $R^{aa}$ ne désigne pas ou ne contient pas de groupement $P^1$, $P^2$ ou $P^3$,

$R^0$, $R^{00}$ H ou alkyle ayant de 1 à 12 atomes de C,

$R^y$ et $R^z$ H, F, $CH_3$ ou $CF_3$,

$X^1$, $X^2$, $X^3$ -CO-O-, -O-CO- ou une liaison simple,

$Z^{M1}$ -O-, -CO-, $-C(R^yR^z)-$ ou $-CF_2CF_2-$,

$Z^{M2}$ $Z^{M3}$ -CO-O-, -O-CO-, $-CH_2O-$, $-OCH_2-$, $-CF_2O-$, $-OCF_2-$ ou $-(CH_2)_n-$, où n vaut 2, 3 ou 4,

L F, Cl, CN ou alkyle, alcoxy, alcényle, alcynyle, alkylcarbonyle, alcoxycarbonyle, alkylcarbonyloxy ou alcoxycarbonyloxy à chaîne linéaire ou ramifiée, éventuellement mono- ou polyfluoré, ayant de 1 à 12 atomes de C,

L', L" H, F ou Cl,

k 0 ou 1,

r 0, 1, 2, 3 ou 4,

s 0, 1, 2 ou 3,

t 0, 1 ou 2,

x 0 ou 1.

8. Milieu LC selon l'une ou plusieurs parmi les revendications 1 à 7, **caractérisé en ce qu'**il comprend un ou plusieurs autres composés polymérisables choisis parmi les formules CM et MT

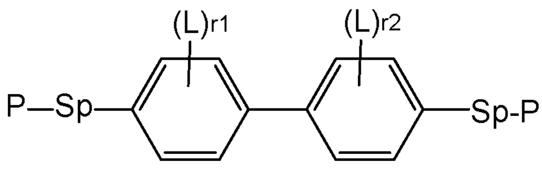

CM

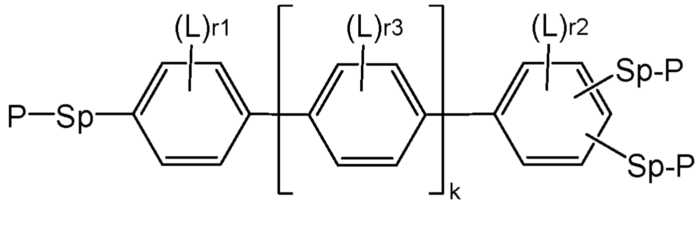

MT

dans lesquelles les radicaux individuels, à chaque occurrence de manière identique ou différente, et chacun, indépendamment les uns des autres, revêtent la signification suivante :

P, Sp l'une des significations données selon la revendication 1,

L F, Cl, CN ou alkyle, alcoxy, alcényle, alcynyle, alkylcarbonyle, alcoxycarbonyle, alkylcarbonyloxy ou alcoxycarbonyloxy à chaîne linéaire ou ramifiée, éventuellement mono- ou polyfluoré, ayant de 1 à 12 atomes de C,

k 0 ou 1,

r1, r2, r3 0, 1, 2, 3 ou 4, préférablement 0, 1 ou 2, très préférablement 0 ou 1.

**9.** Milieu LC selon la revendication 8, **caractérisé en ce que** les autres composés polymérisables sont choisis parmi les sous-formules suivantes

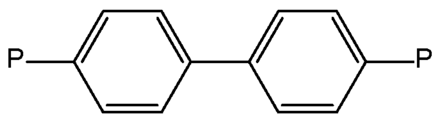

CM-1-1

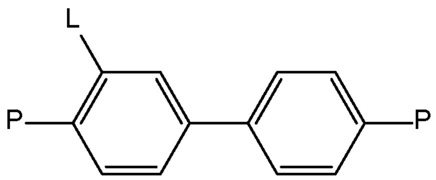

CM-1-2

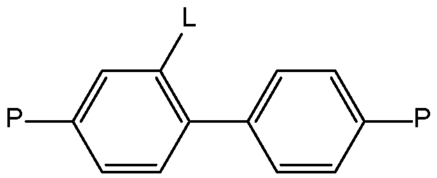

CM-1-3

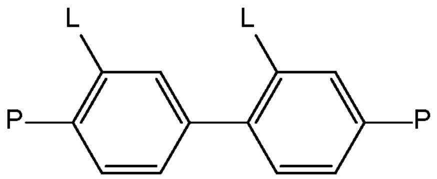

CM-1-4

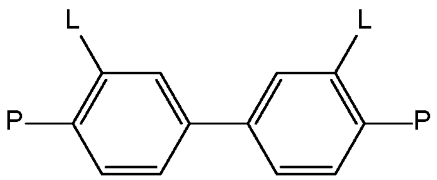

CM-1-5

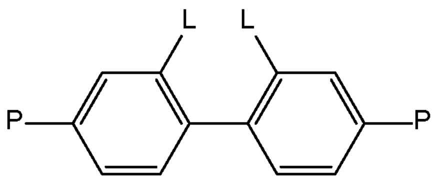

CM-1-6

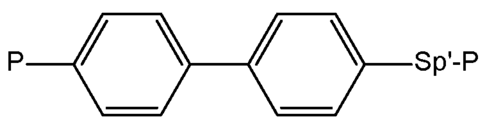

CM-2-1

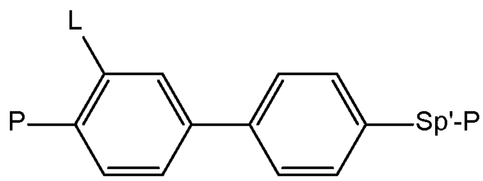

CM-2-2

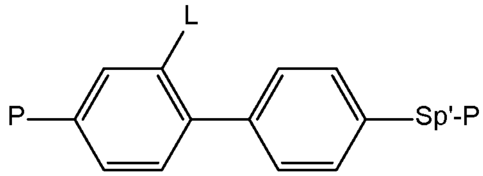

CM-2-3

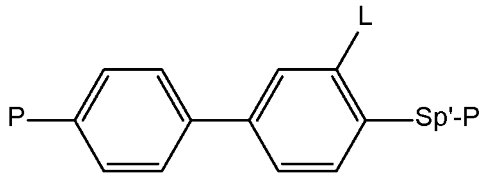

CM-2-4

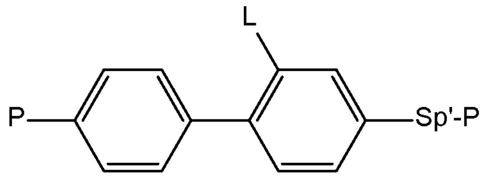

CM-2-5

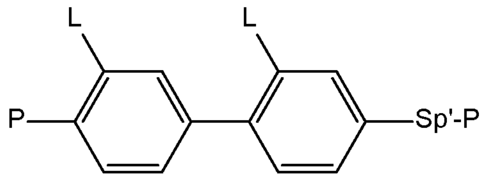

CM-2-6

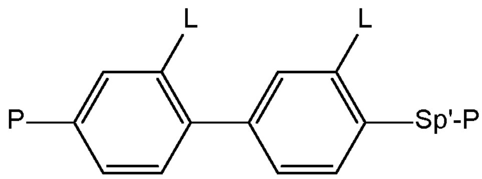

CM-2-7

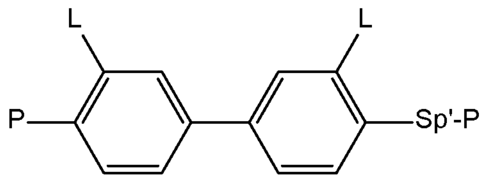

CM-2-8

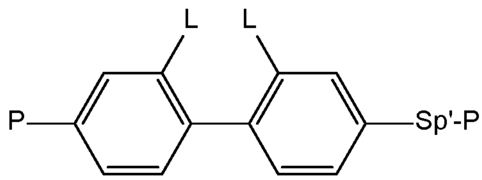

CM-2-9

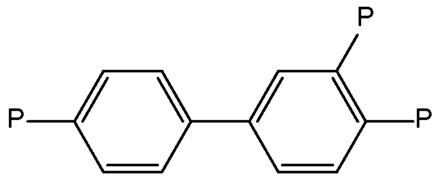
MT-1-1

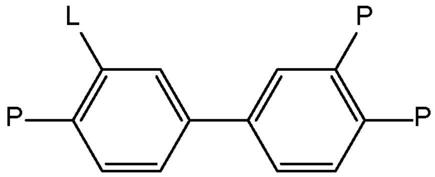
MT-1-2

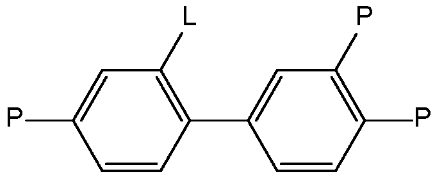
MT-1-3

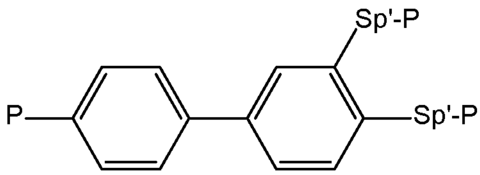
MT-1-4

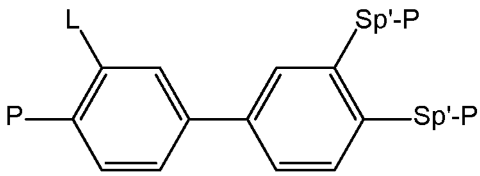
MT-1-5

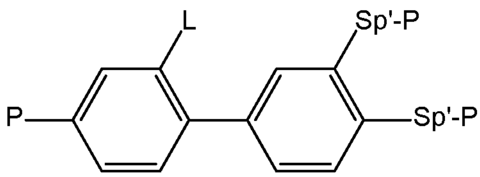
MT-1-6

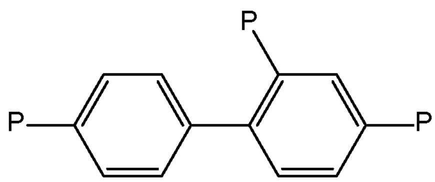
MT-2-1

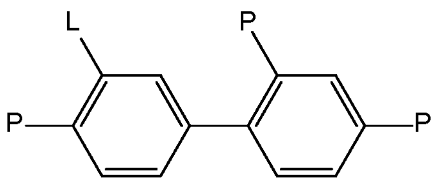
MT-2-2

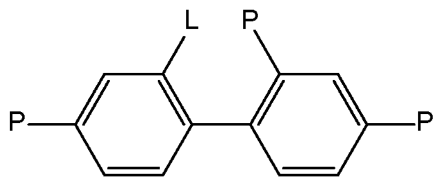

MT-2-3

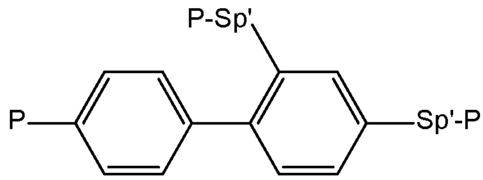

MT-2-4

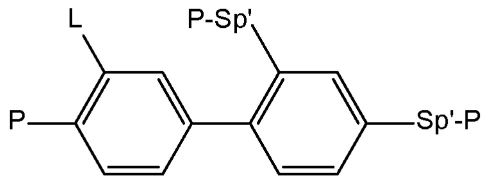

MT-2-5

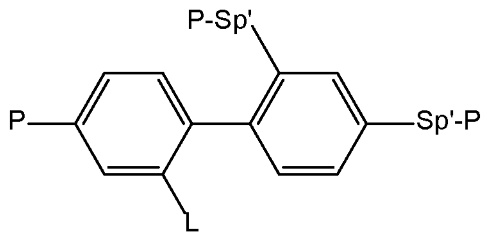

MT-2-6

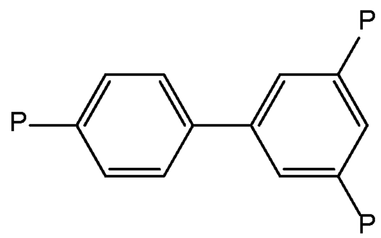

MT-3-1

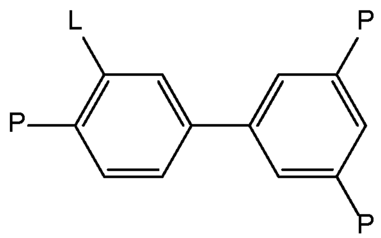

MT-3-2

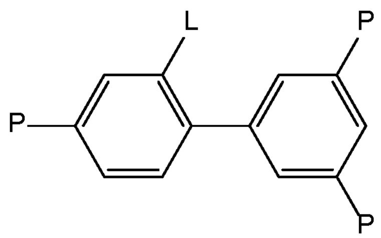

MT-3-3

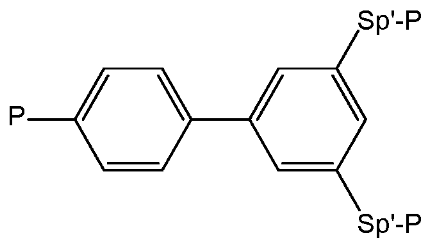

MT-3-4

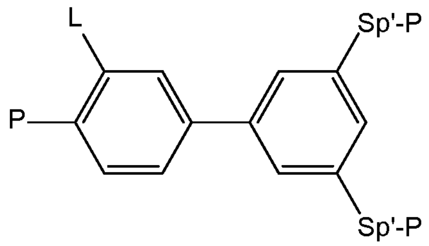

MT-3-5

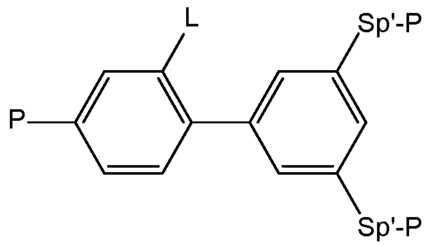

MT-3-6

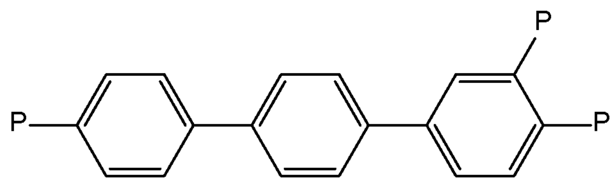

MT-4-1

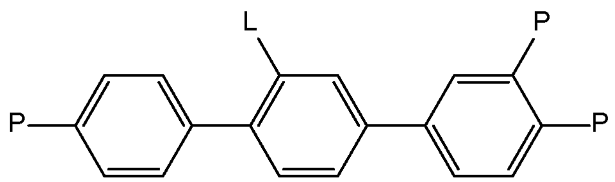

MT-4-2

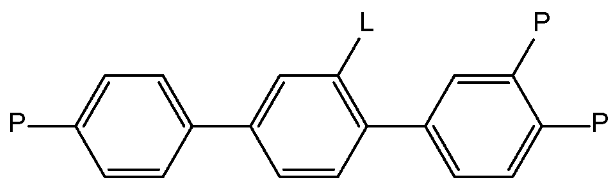

MT-4-3

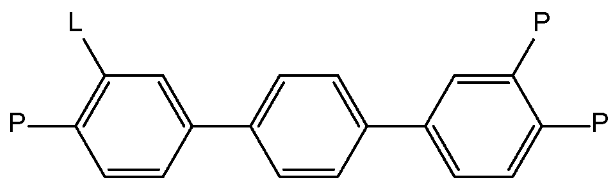

MT-4-4

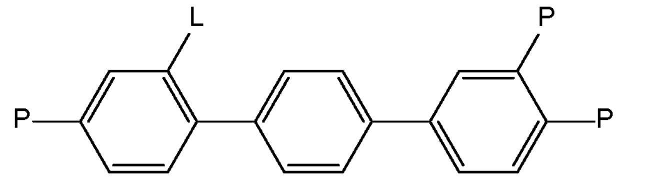

MT-4-5

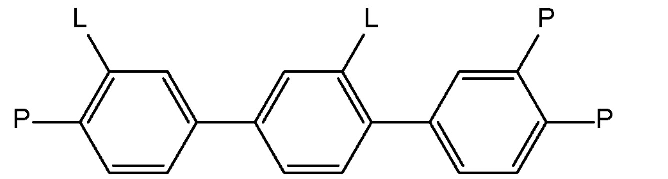

MT-4-6

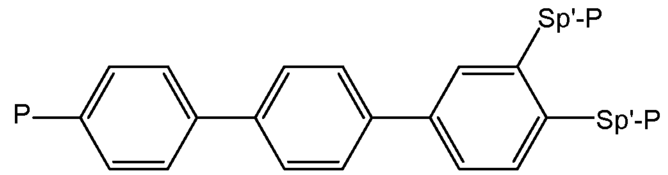

MT-4-7

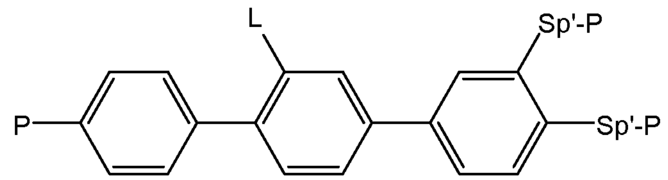

MT-4-8

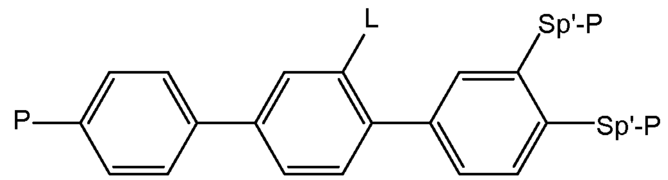

MT-4-9

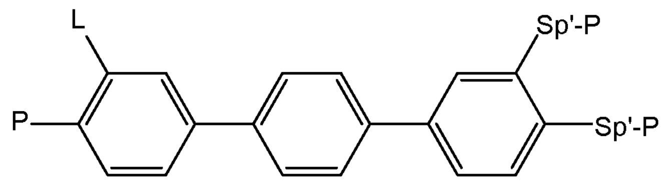

MT-4-10

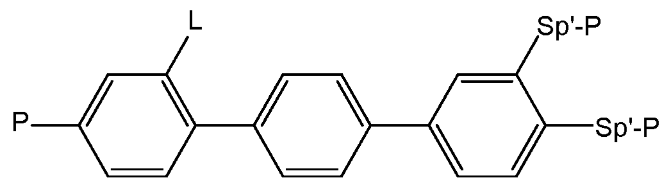

MT-4-11

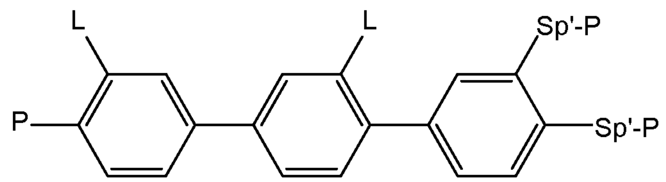

MT-4-12

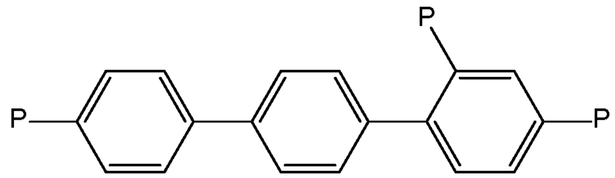

MT-5-1

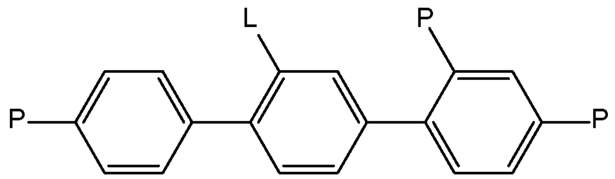

MT-5-2

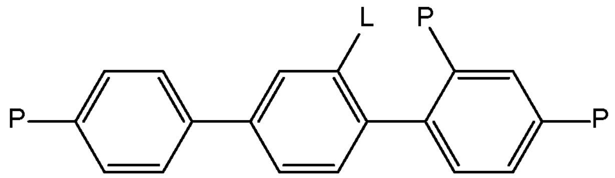

MT-5-3

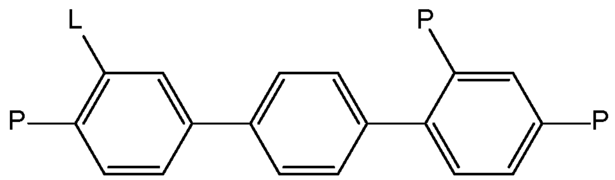

MT-5-4

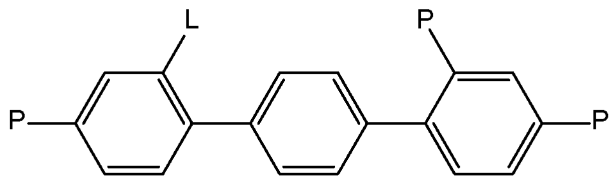

MT-5-5

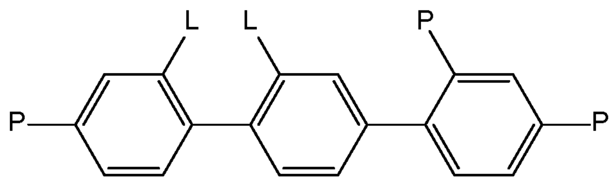

MT-5-6

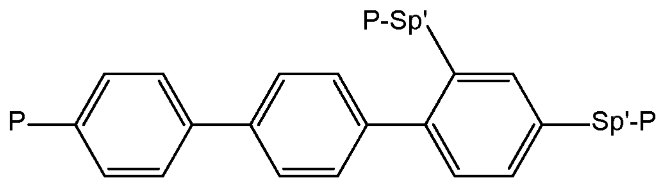

MT-5-7

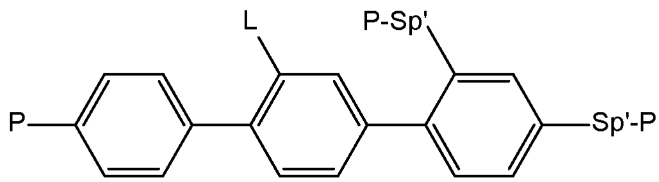

MT-5-8

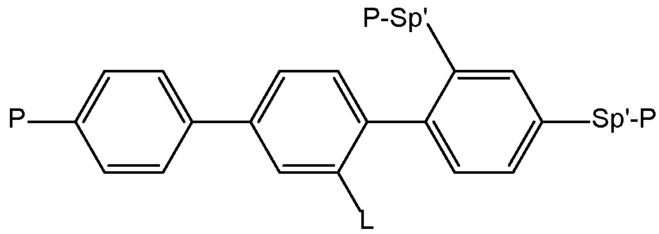

MT-5-9

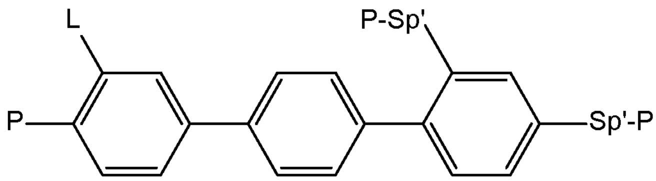

MT-5-10

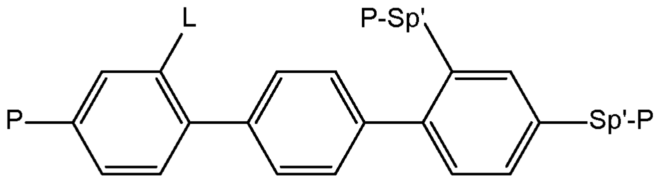

MT-5-11

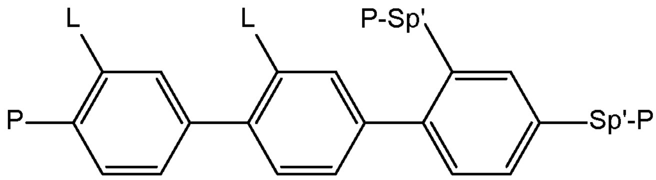

MT-5-12

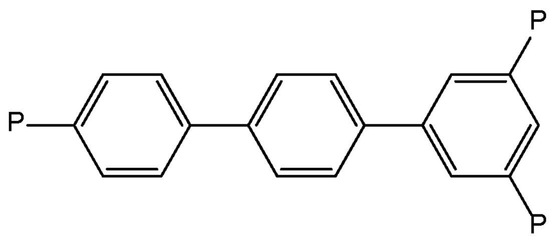

MT-6-1

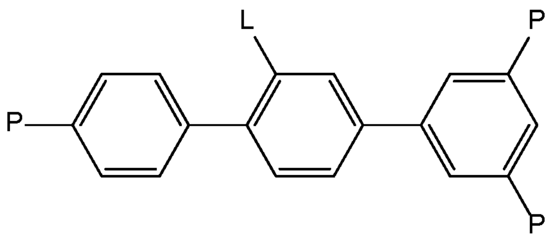

MT-6-2

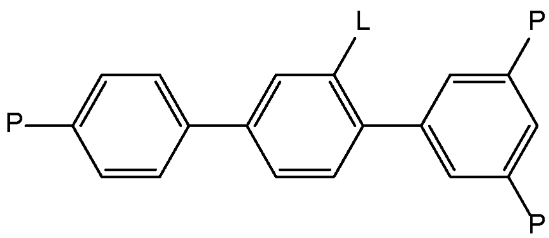

MT-6-3

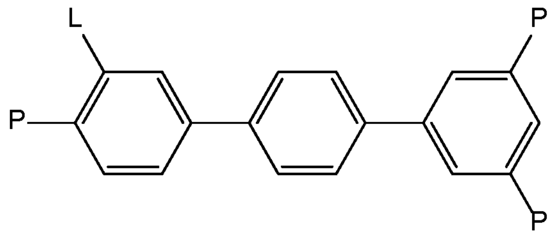

MT-6-4

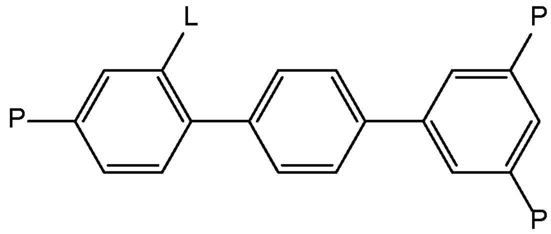

MT-6-5

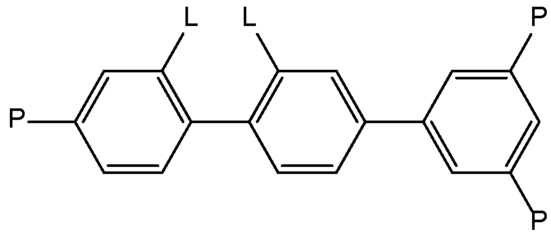

MT-6-6

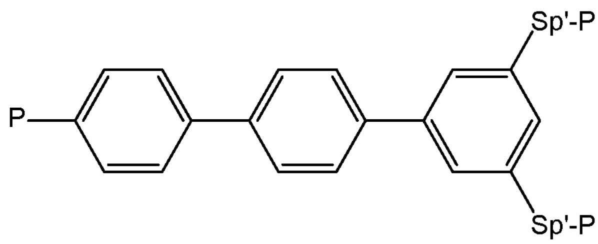

MT-6-7

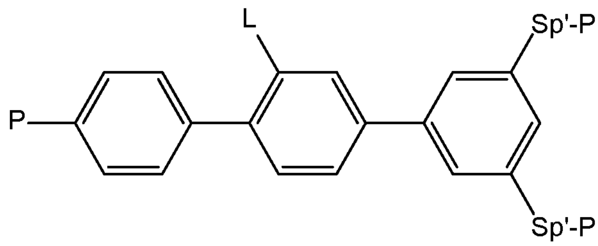

MT-6-8

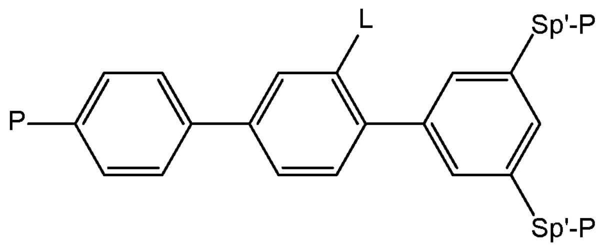

MT-6-9

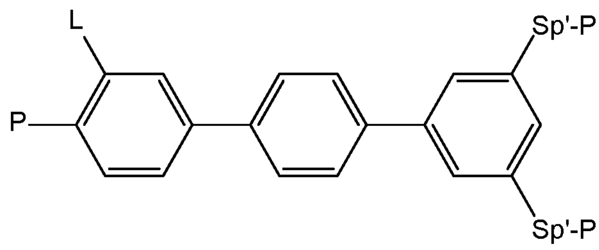

MT-6-10

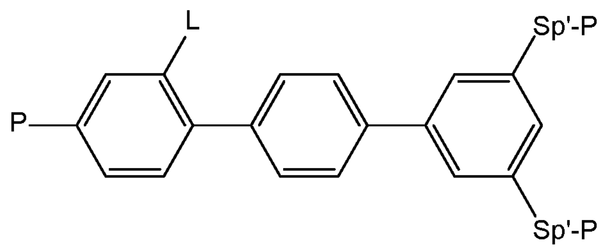

MT-6-11

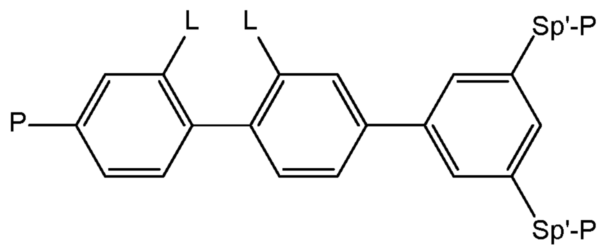

MT-6-12

dans lesquelles P, Sp et L revêtent les significations données selon la revendication 8 et Sp' revêt l'une des significations données pour Sp qui est autre qu'une liaison simple.

**10.** Milieu LC selon la revendication 8 ou 9, **caractérisé en ce que** les autres composés polymérisables sont choisis parmi les sous-formules suivantes

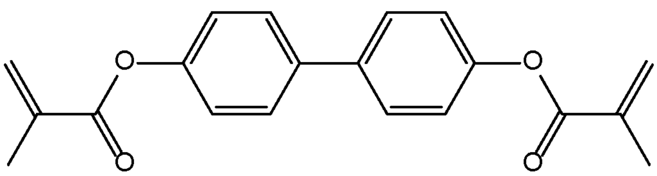

CM-1-1a

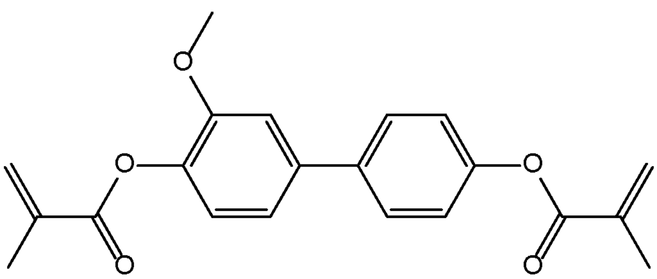

CM-1-2a

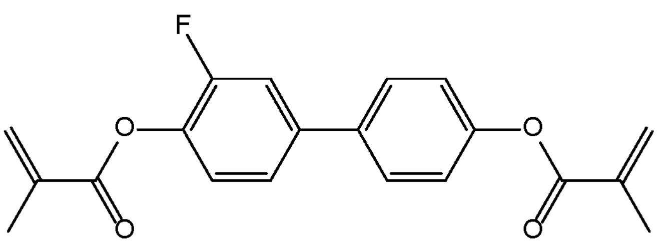

CM-1-2b

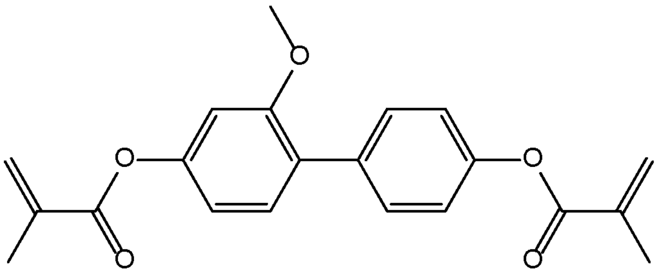

CM-1-3a

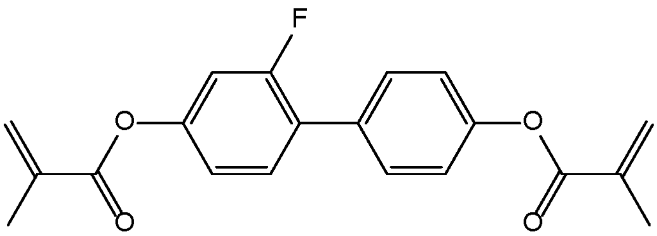

CM-1-3b

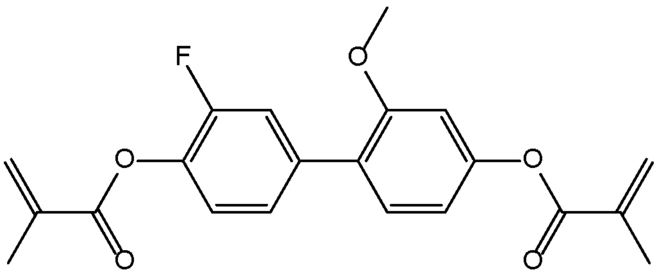

CM-1-4a

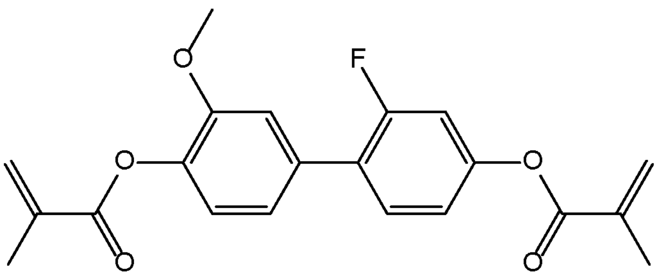

CM-1-4b

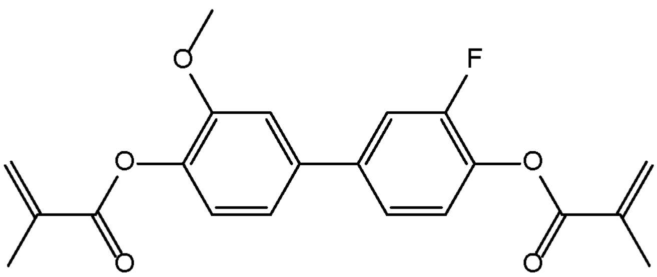

CM-1-5a

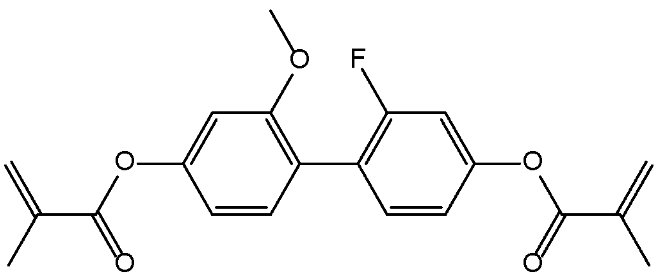

CM-1-6a

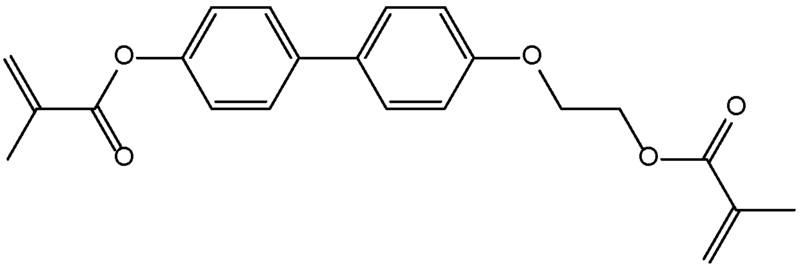

CM-2-1a

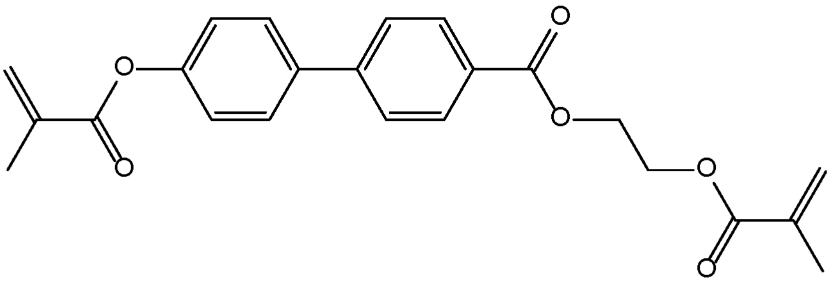

CM-2-1b

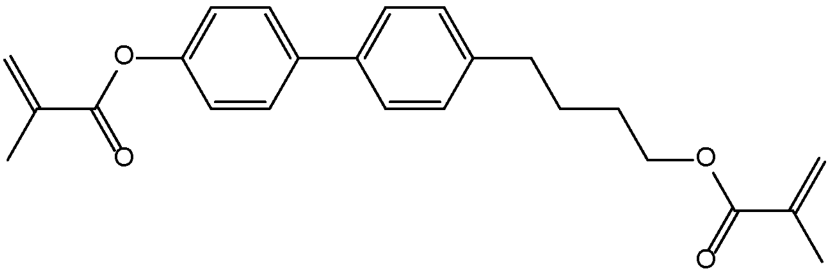

CM-2-1c

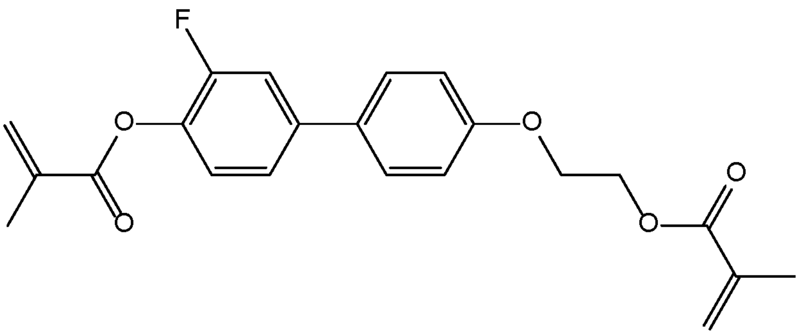

CM-2-2a

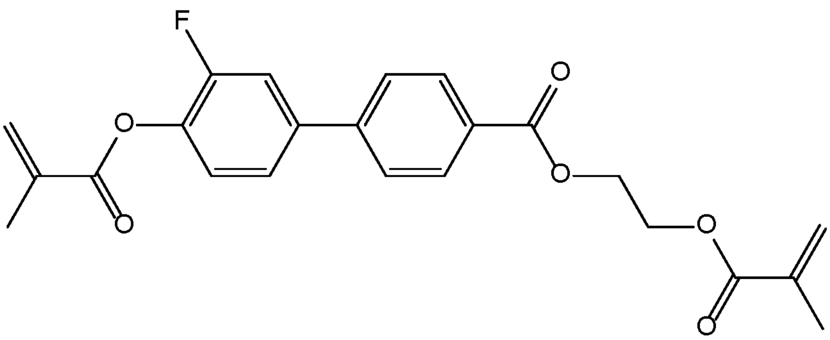

CM-2-2b

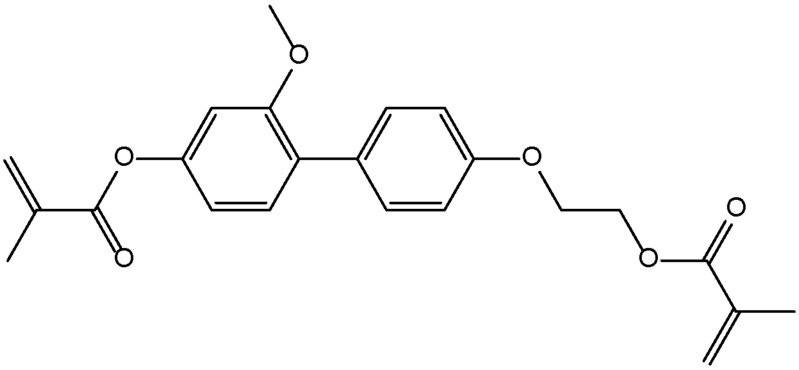

CM-2-3a

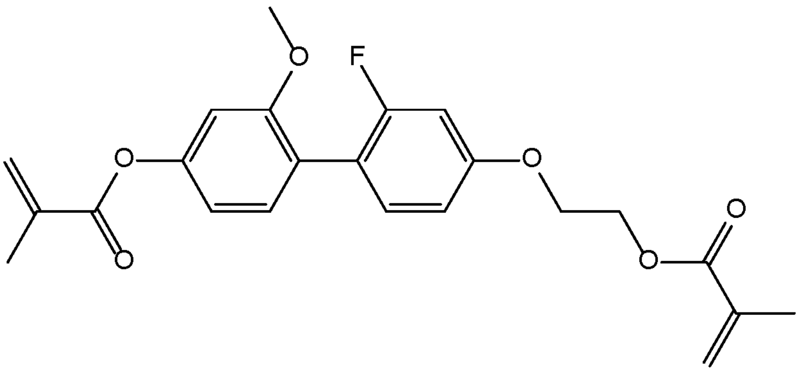

CM-2-9a

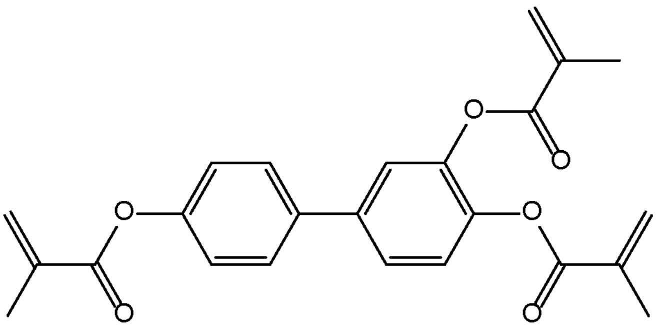

MT-1-1a

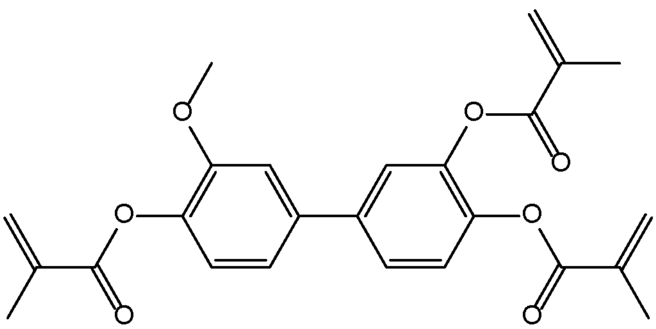

MT-1-2a

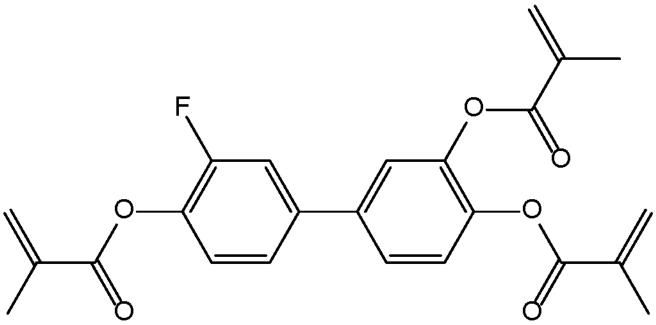

MT-1-2b

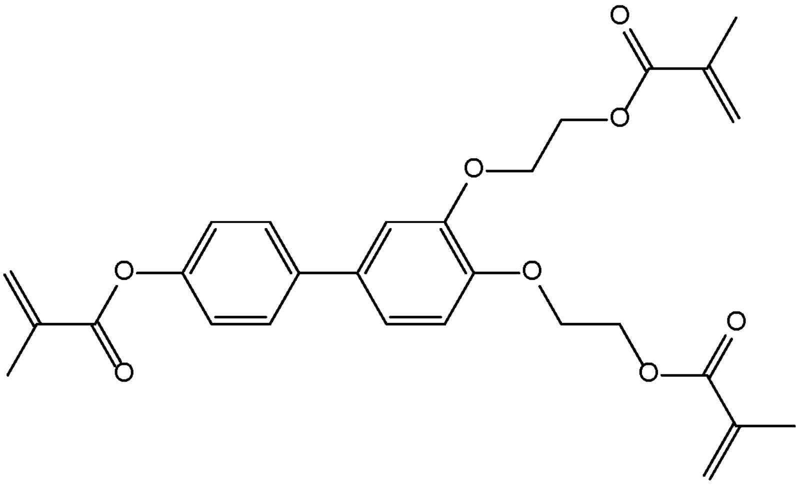

MT-1-4a

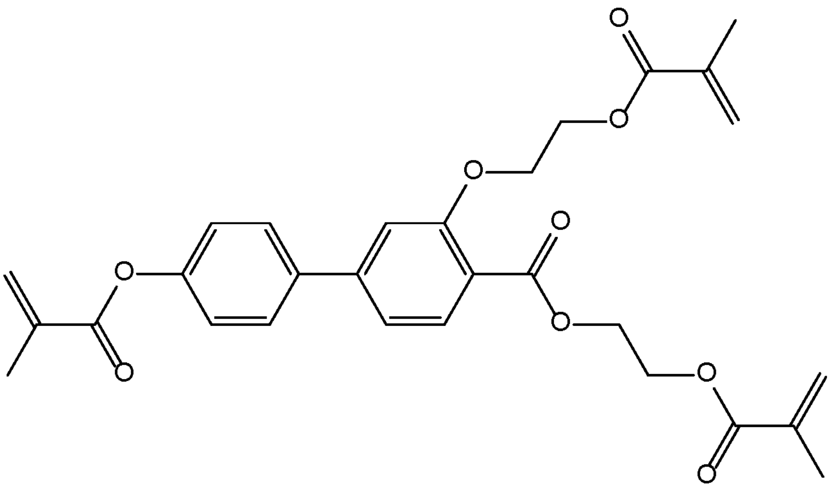

MT-1-4b

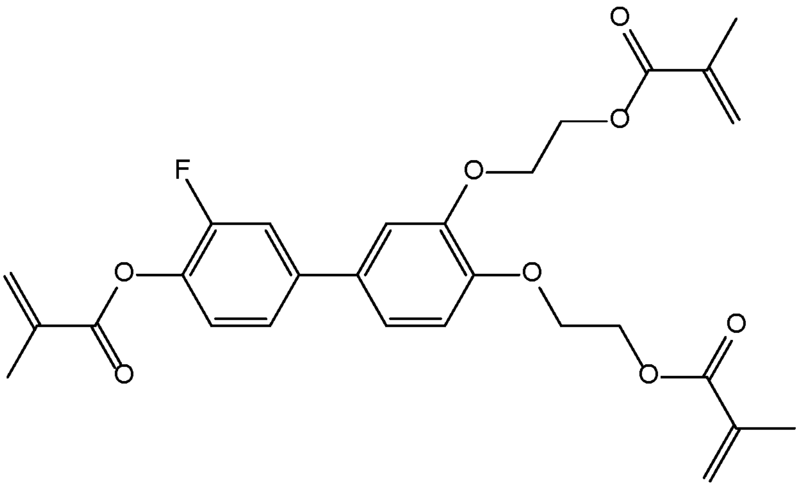

MT-1-5a

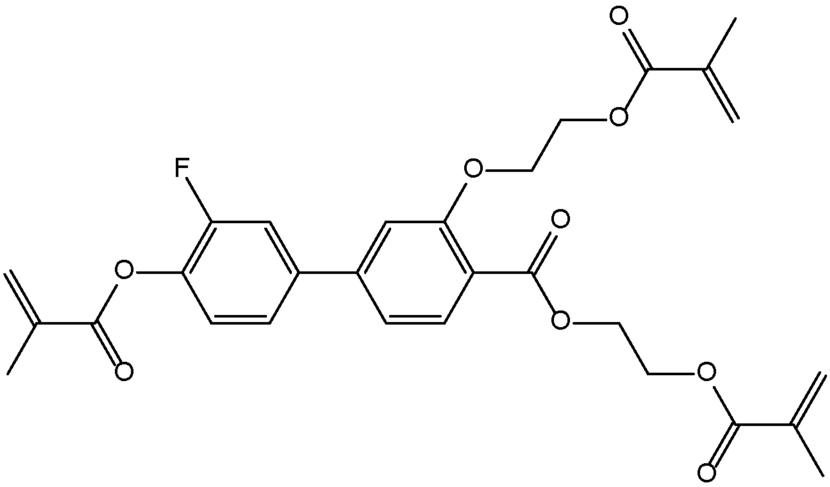

MT-1-5b

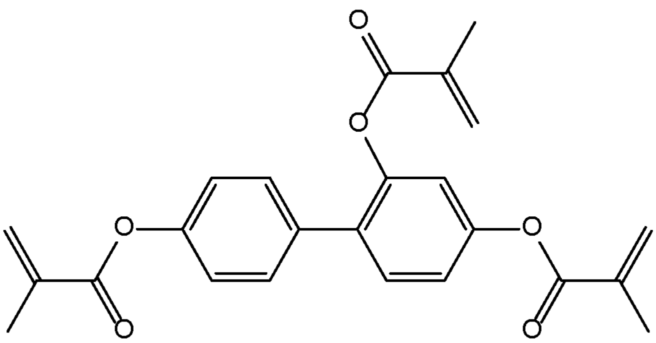

MT-2-1a

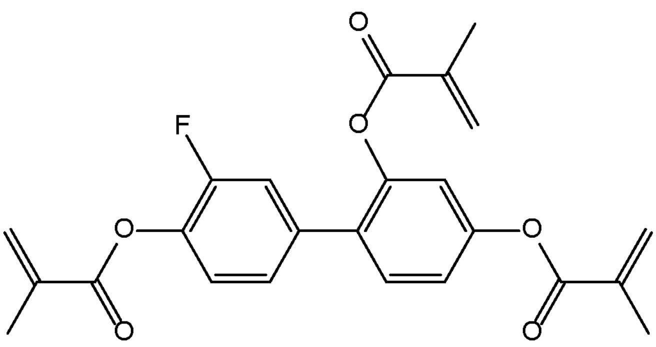

MT-2-2a

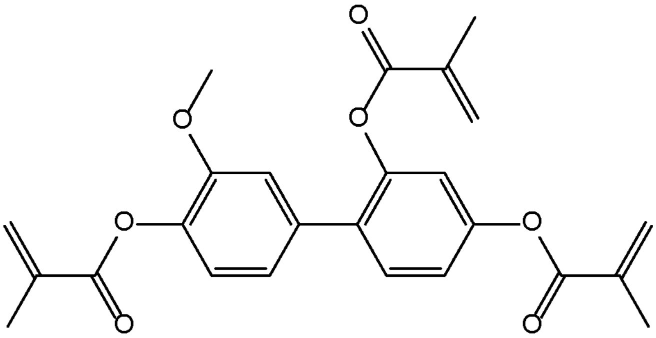

MT-2-2b

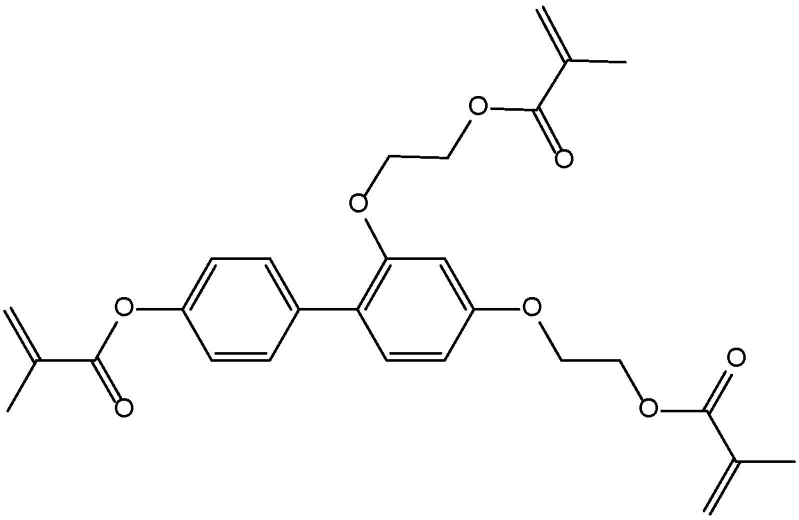

MT-2-4a

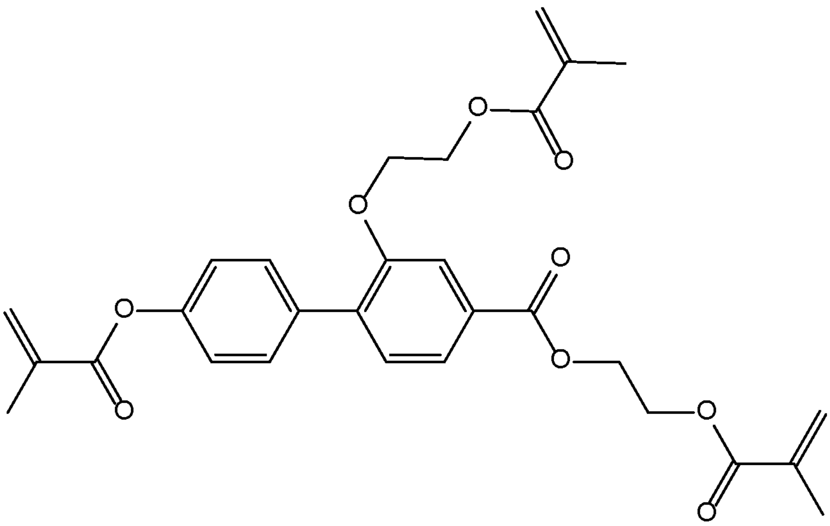

MT-2-4b

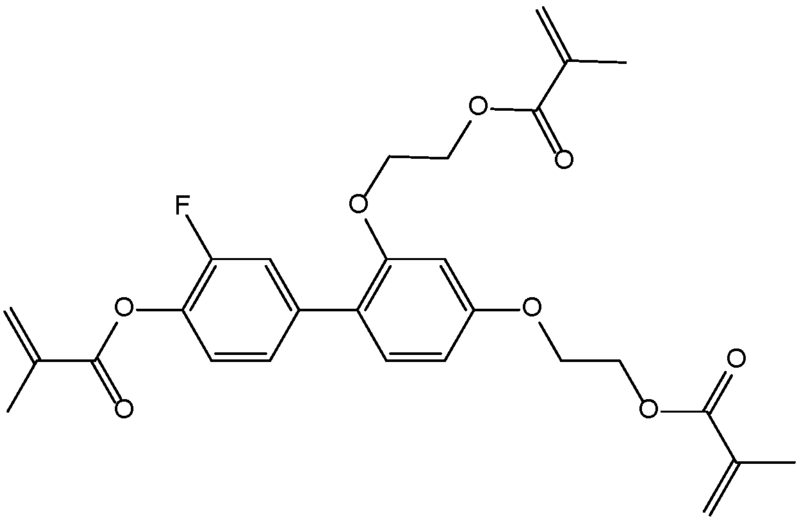

MT-2-5a

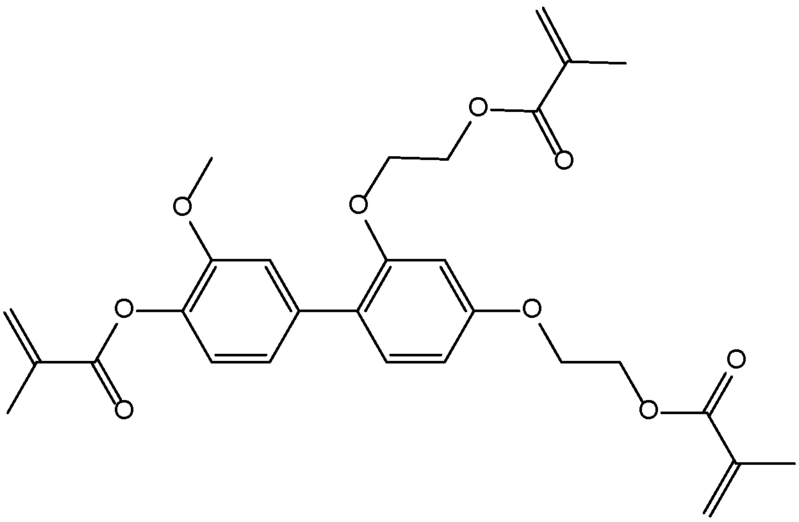

MT-2-5b

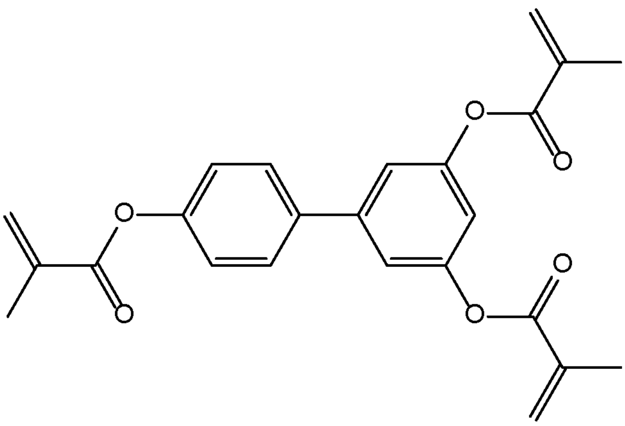

MT-3-1a

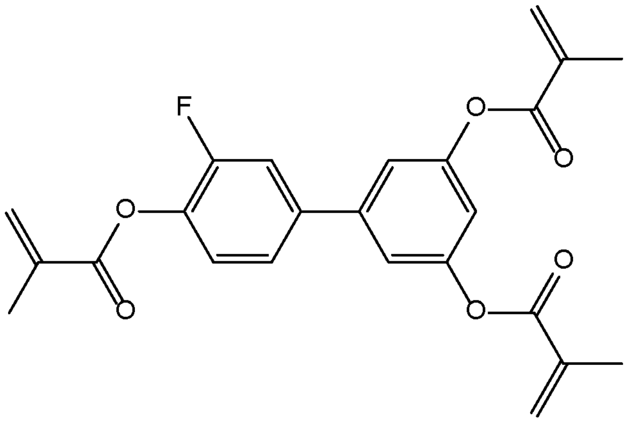

MT-3-2a

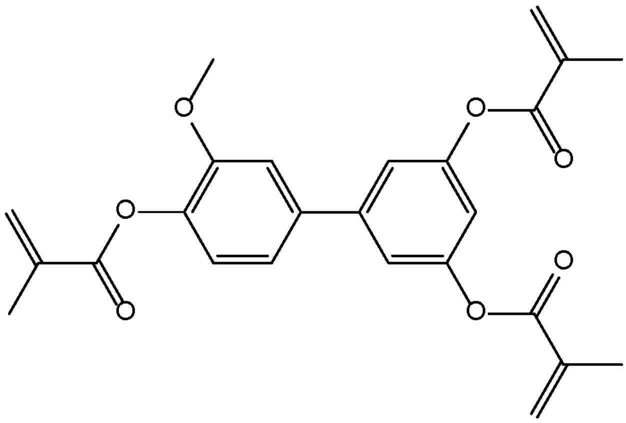

MT-3-2b

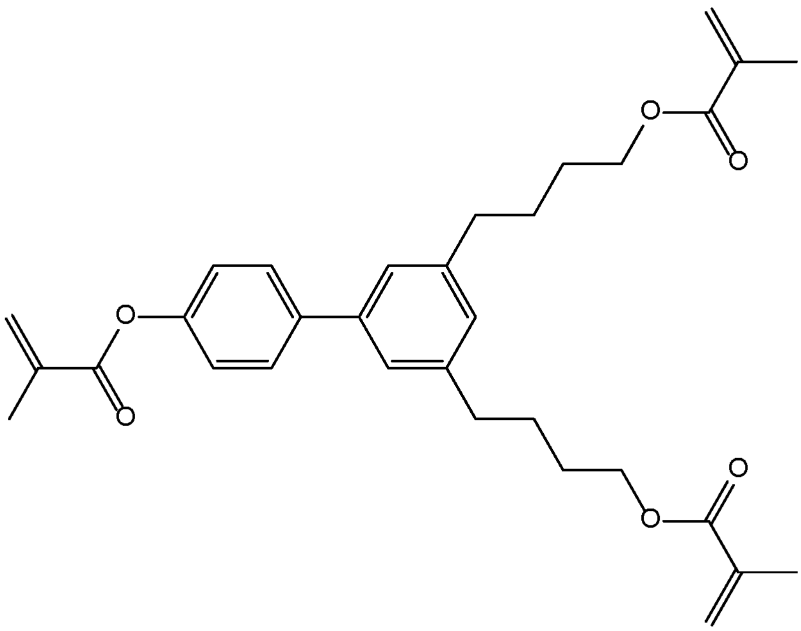

MT-3-4a

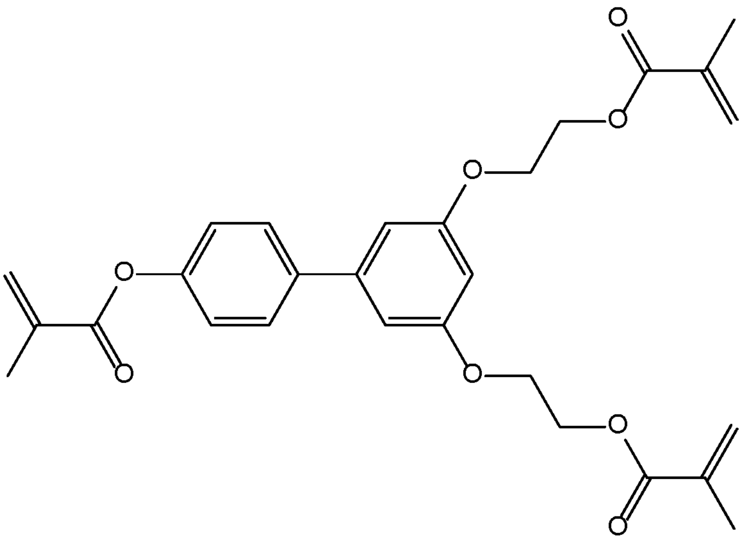

MT-3-4b

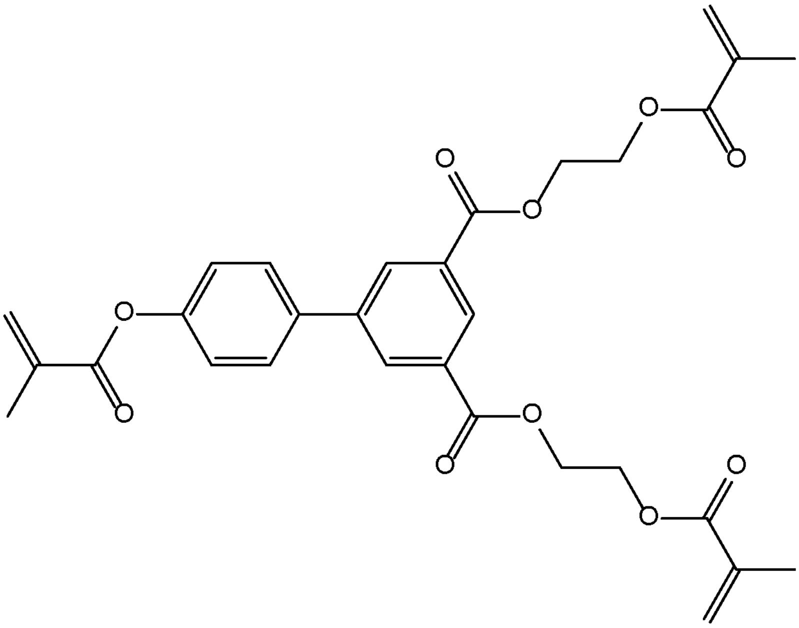

MT-3-4c

MT-3-5a

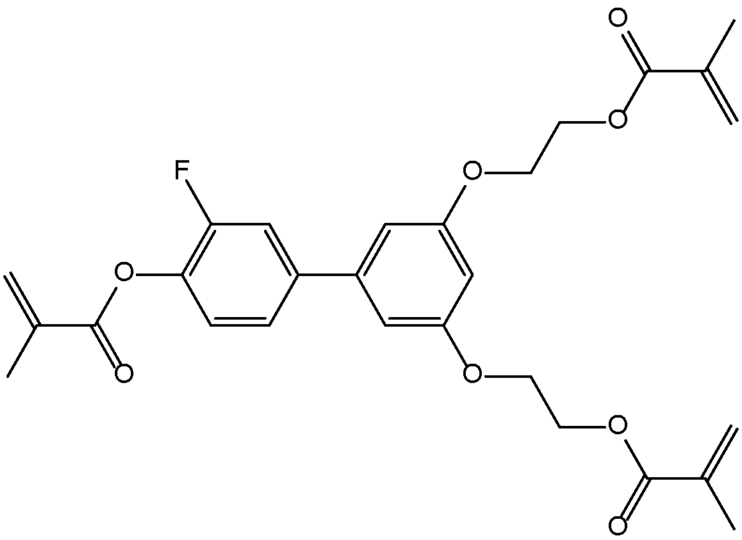

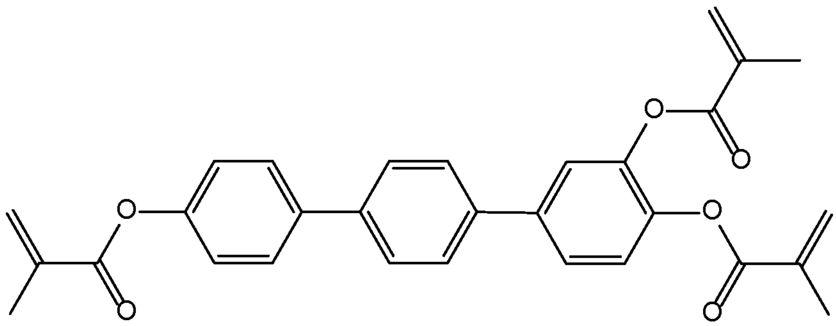

MT-4-1a

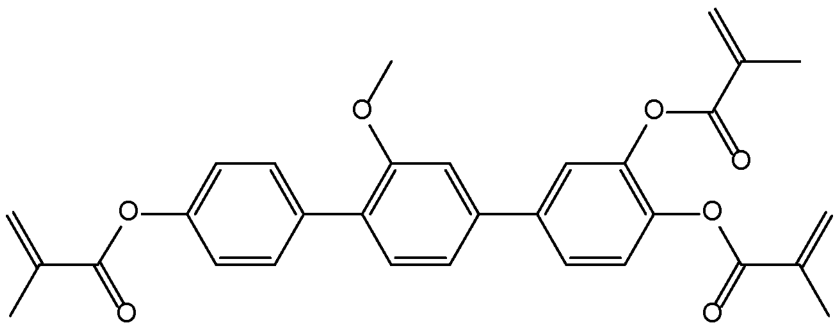

MT-4-2a

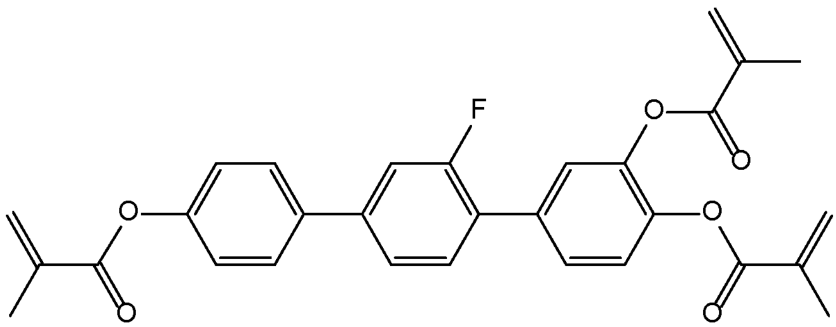

MT-4-3a

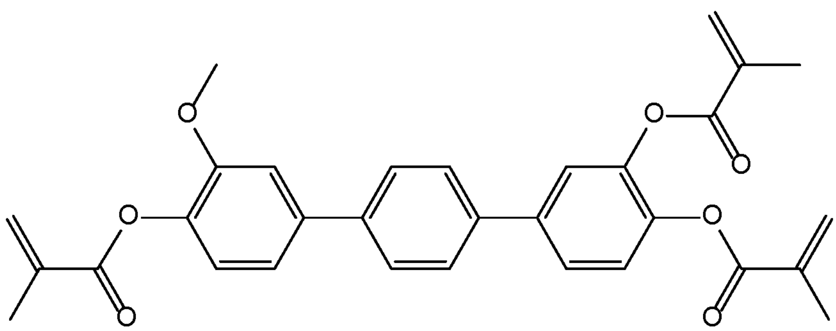

MT-4-4a

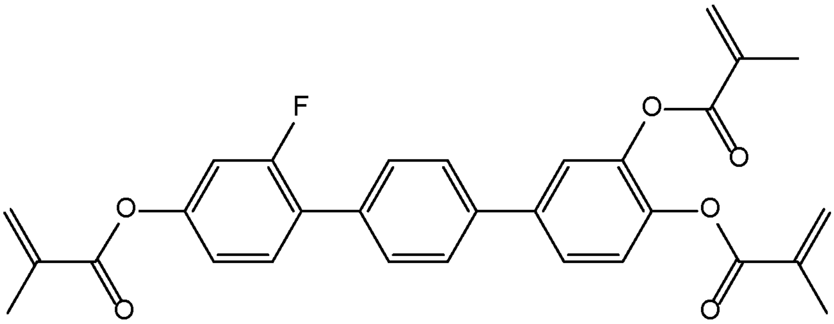

MT-4-5a

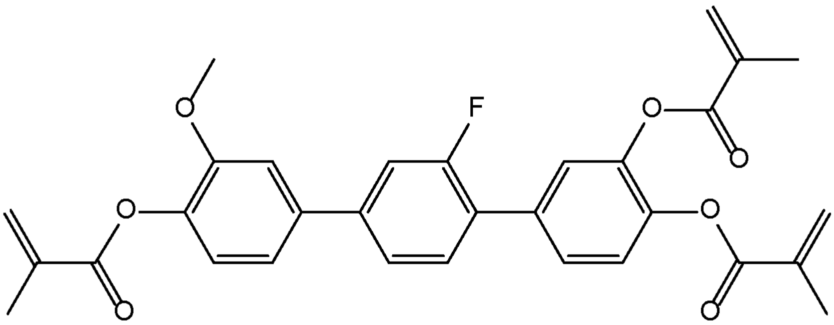

MT-4-6a

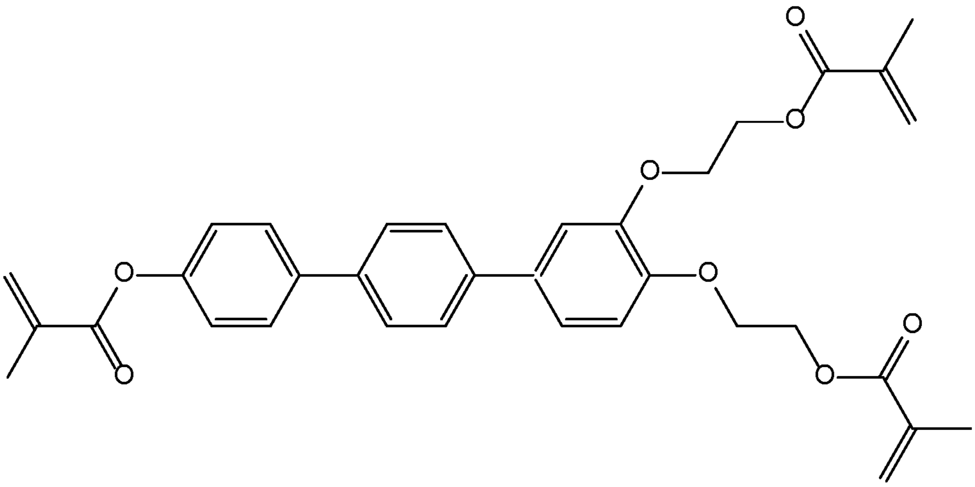

MT-4-7a

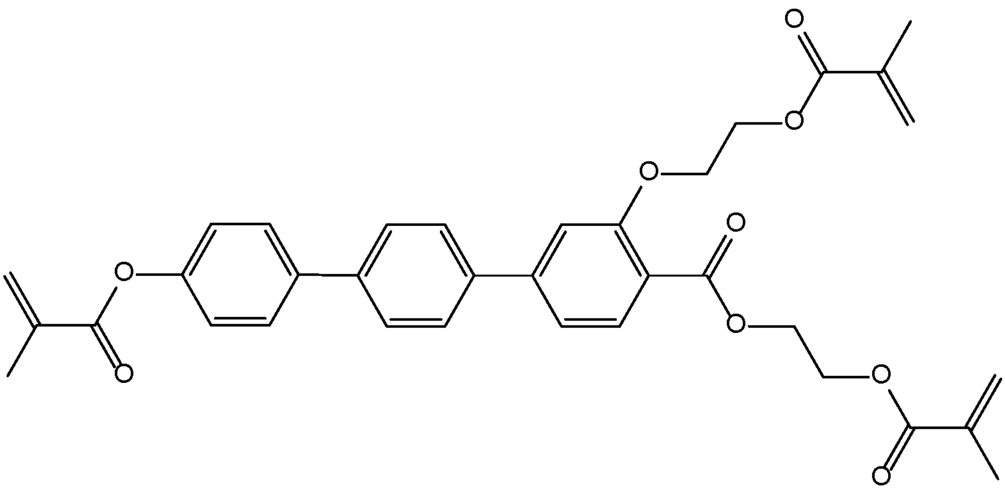

MT-4-7b

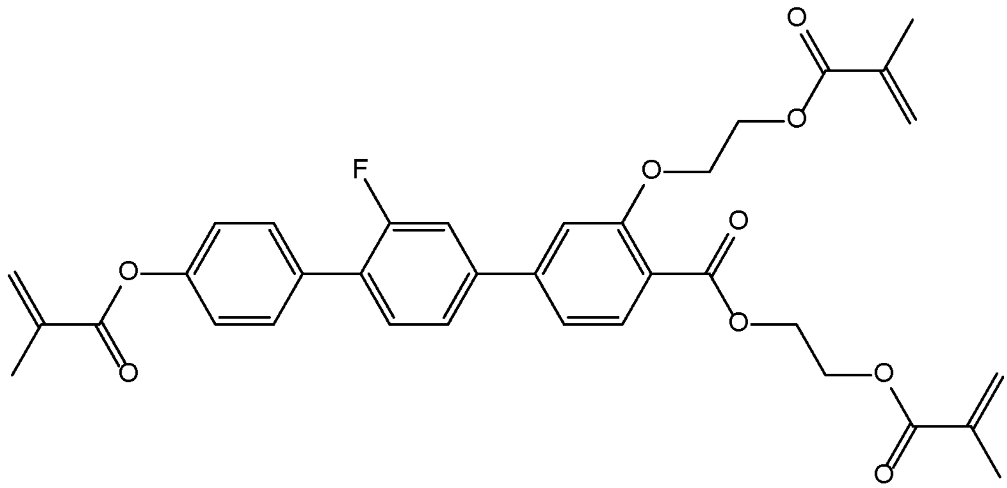

MT-4-8a

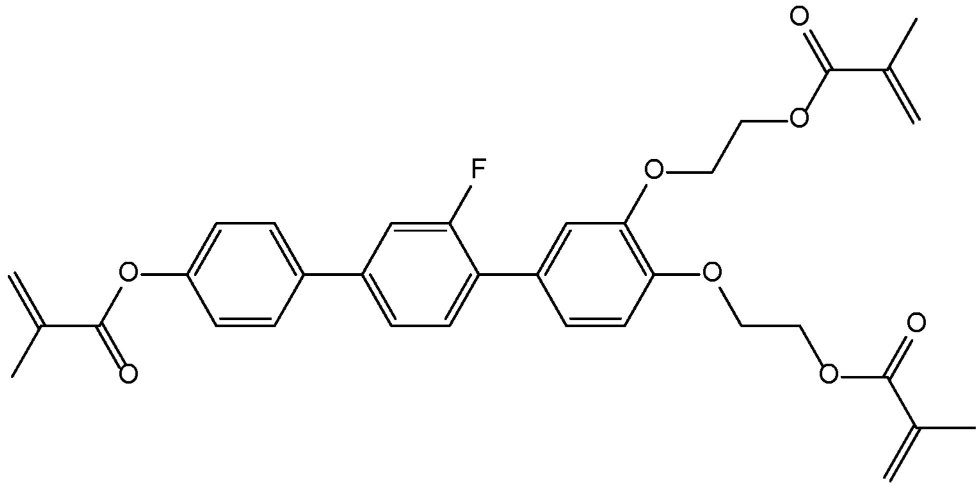

MT-4-9a

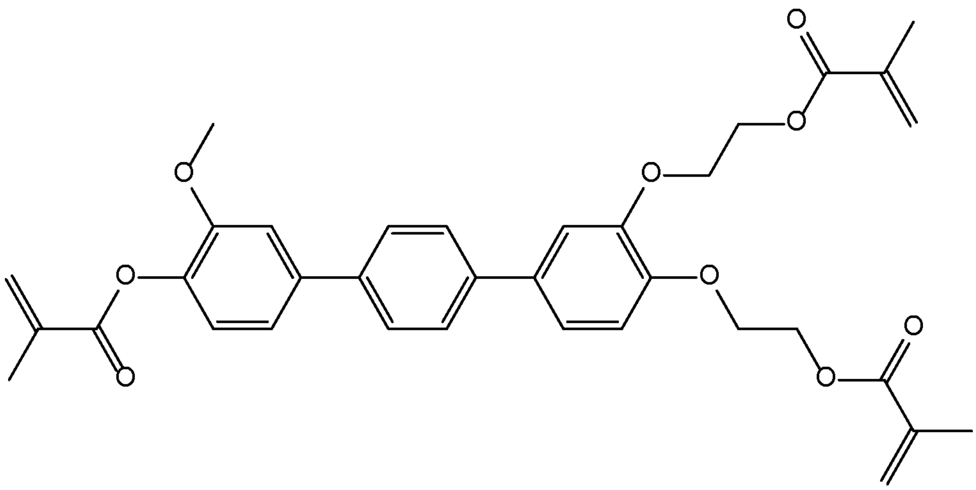

MT-4-10a

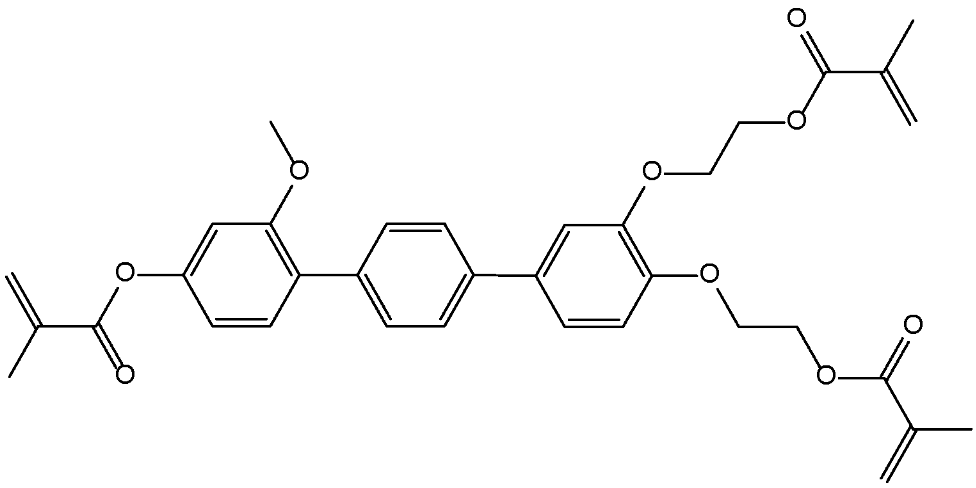

MT-4-11a

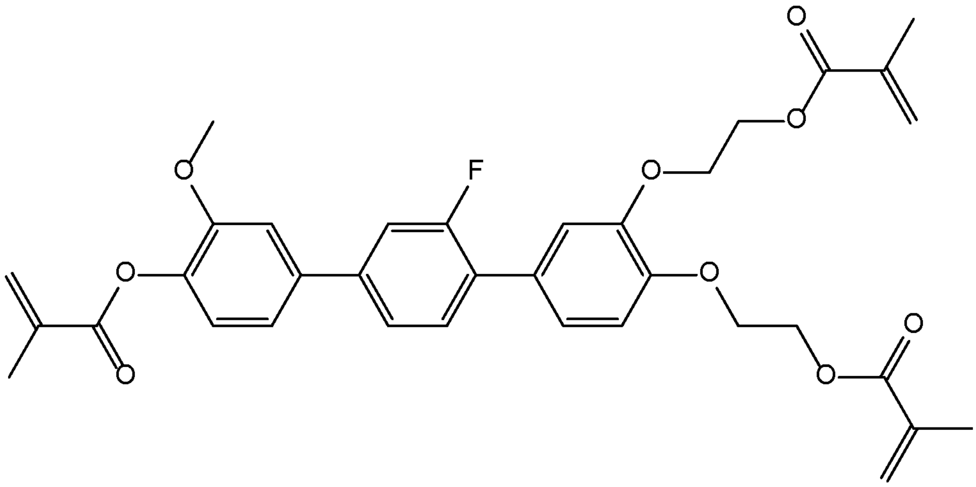

MT-4-12a

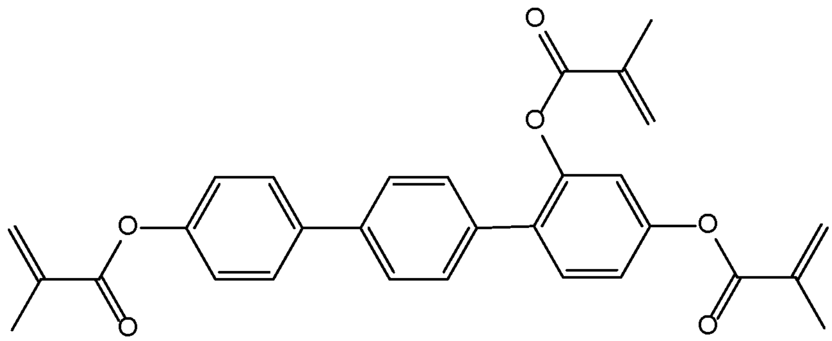

MT-5-1a

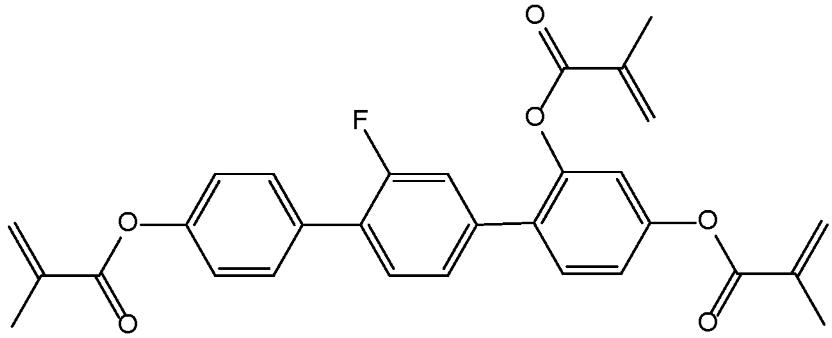

MT-5-2a

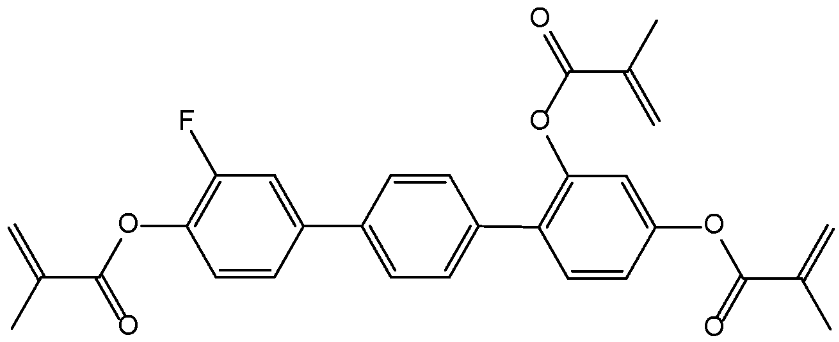

MT-5-4a

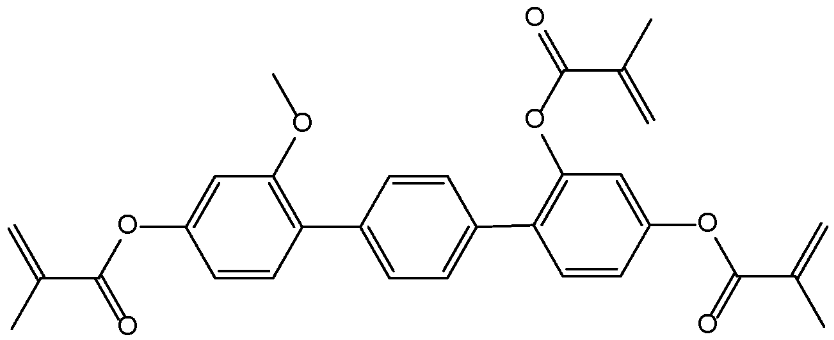

MT-5-5a

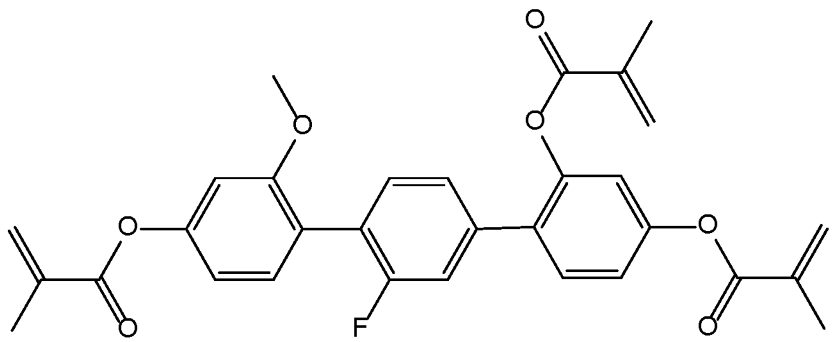

MT-5-6a

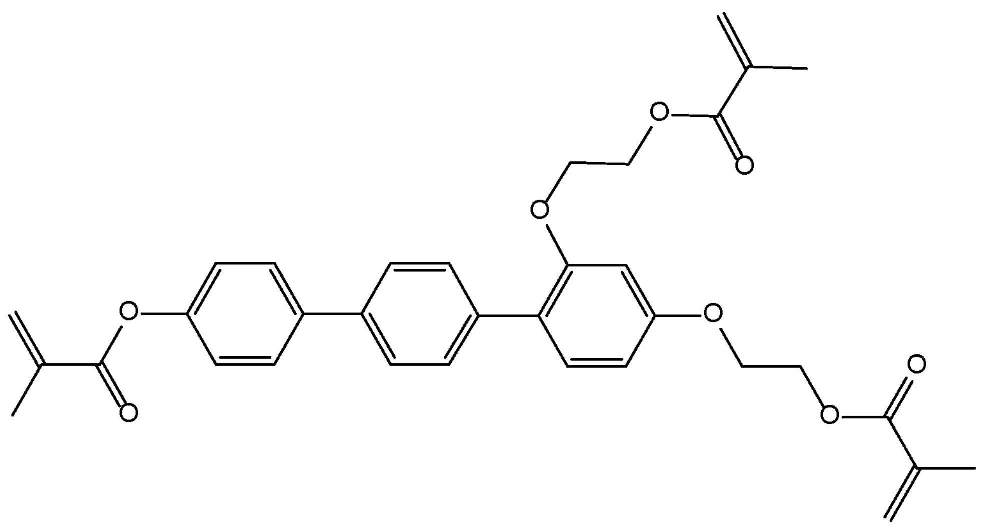

MT-5-7a

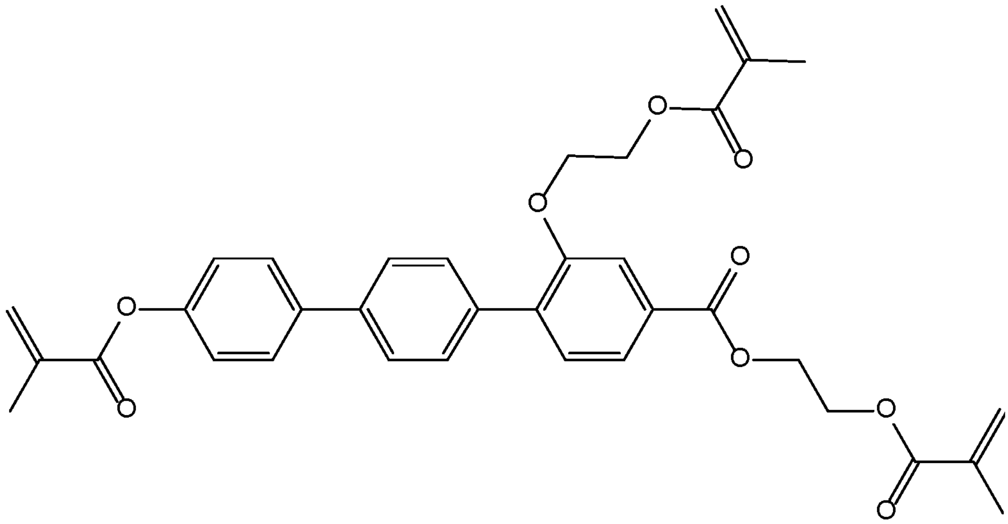

MT-5-7b

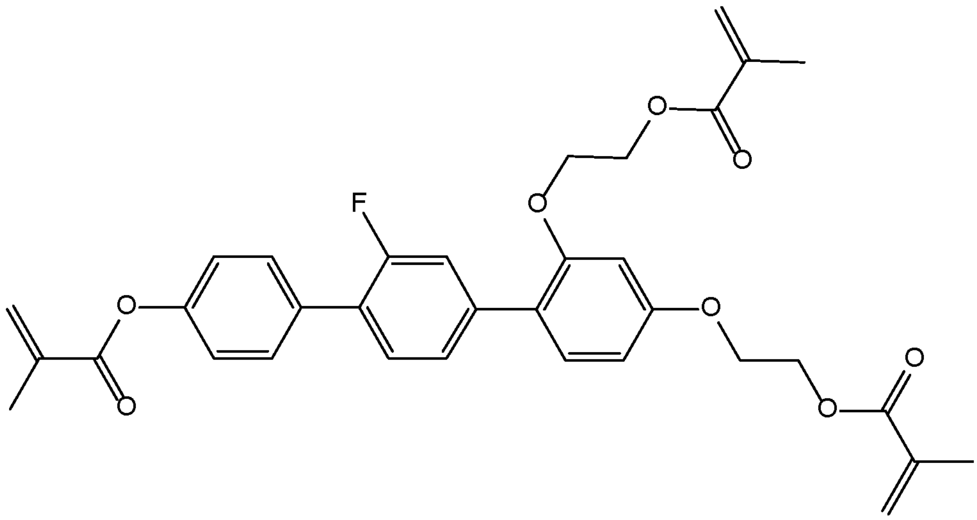

MT-5-8a

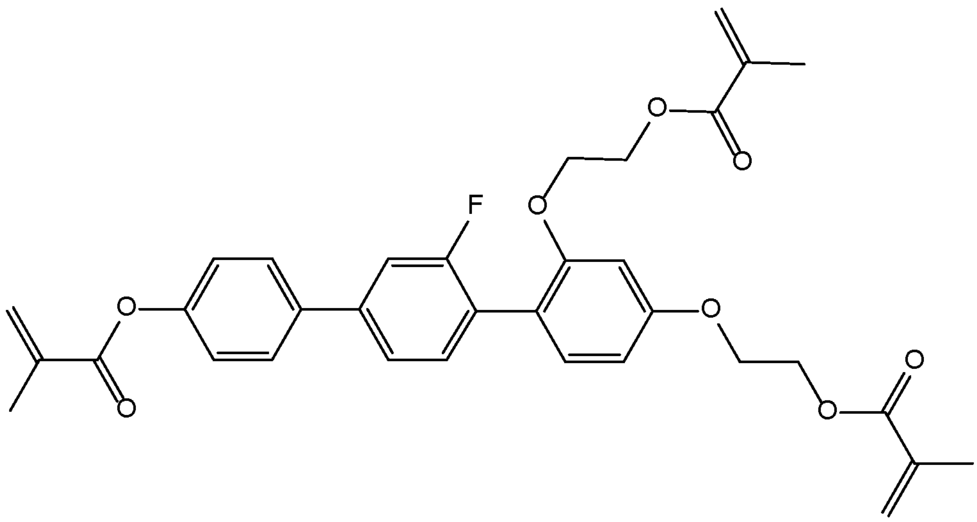

MT-5-9a

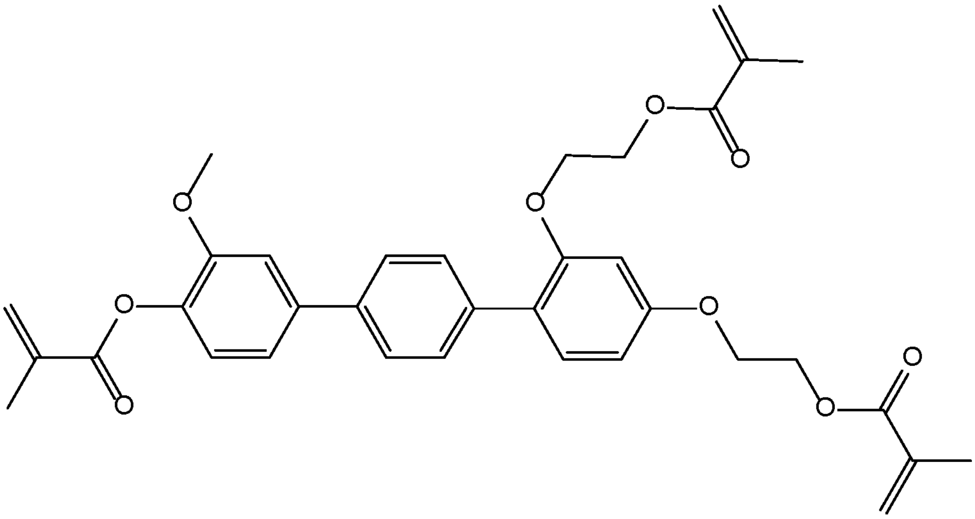

MT-5-10a

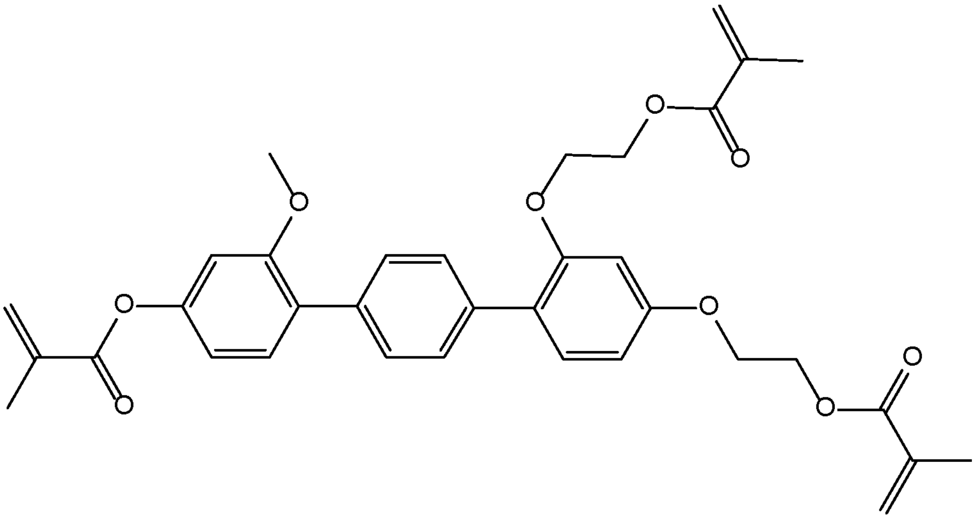

MT-5-11a

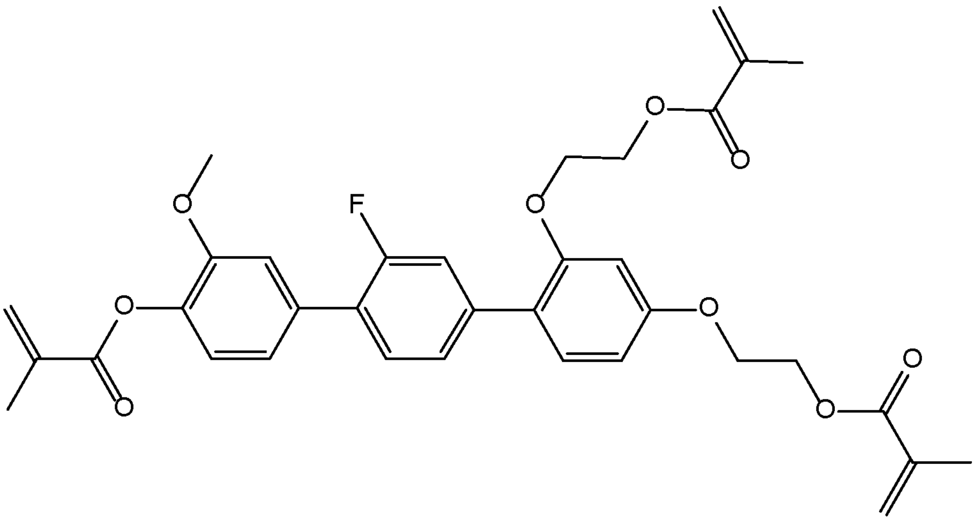

MT-5-12a

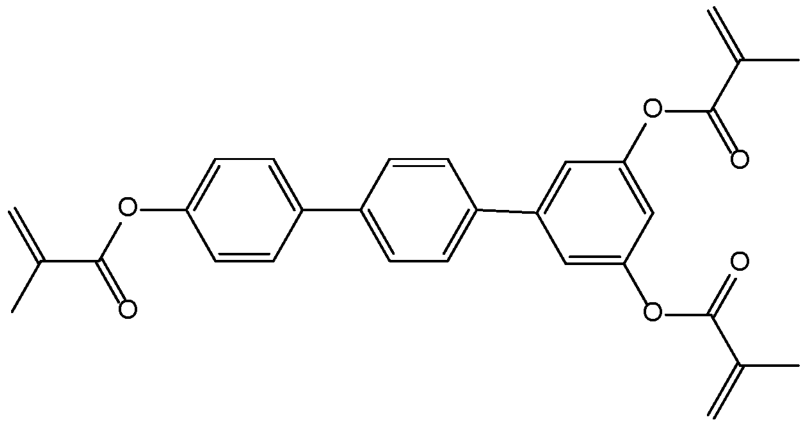

MT-6-1a

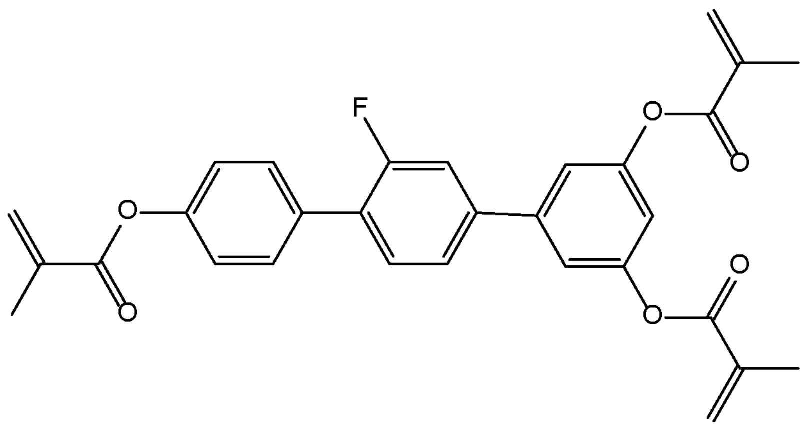

MT-6-2a

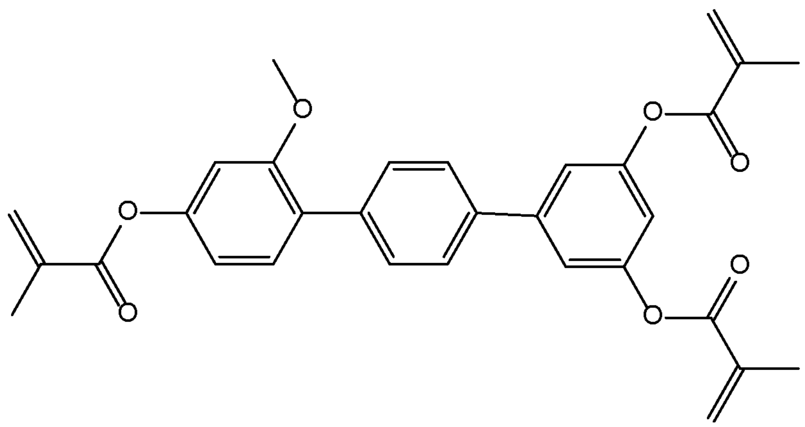

MT-6-5a

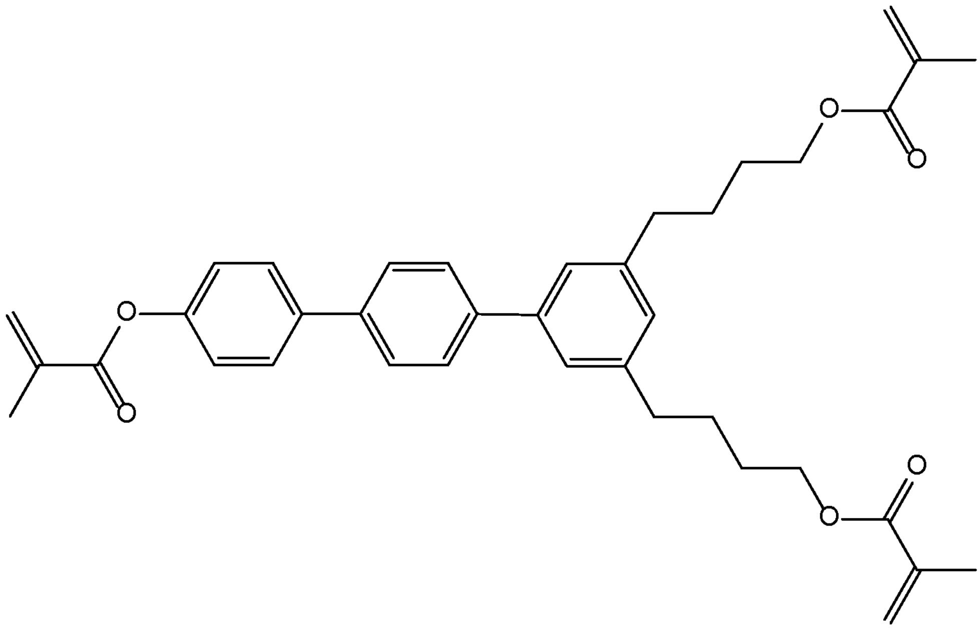

MT-6-7a

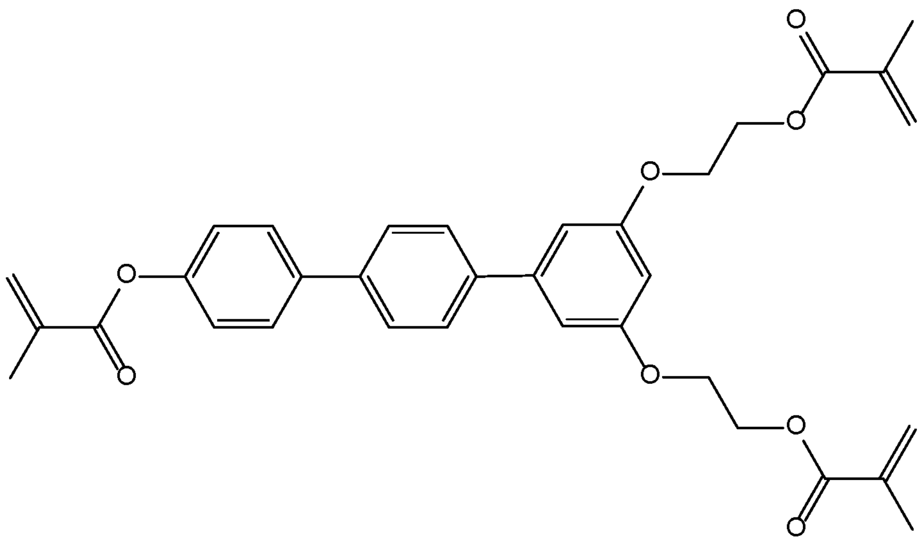

MT-6-7b

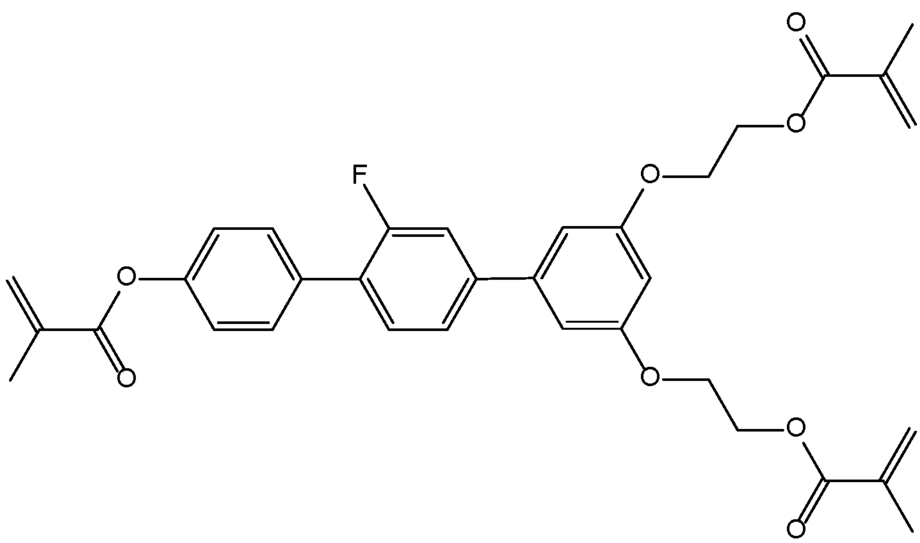

MT-6-8a

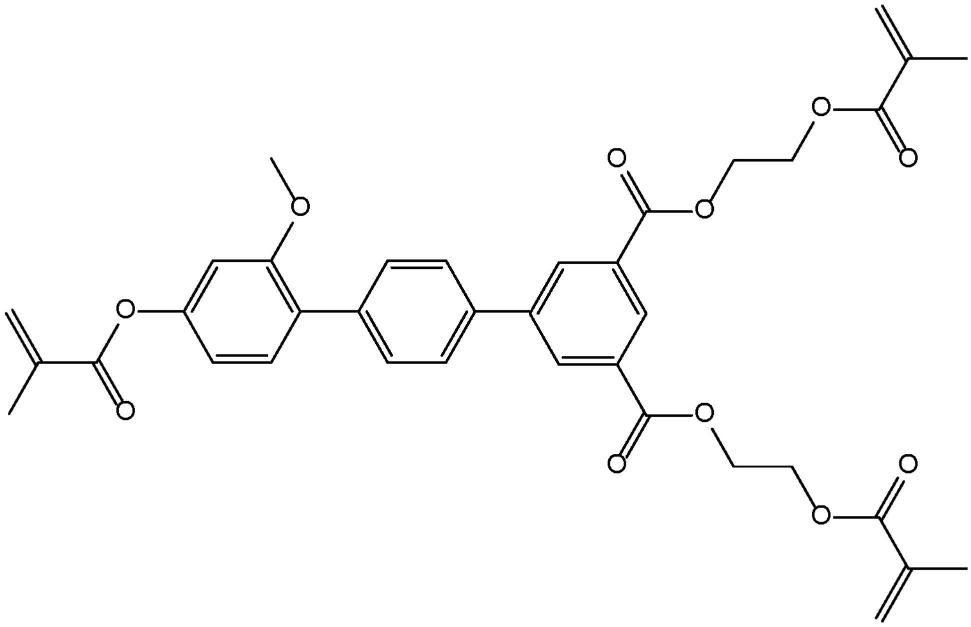

MT-6-11a

11. Milieu LC selon l'une ou plusieurs parmi les revendications 1 à 10, **caractérisé en ce qu'**il contient un ou plusieurs composés de formule II choisis dans le groupe constitué par les composés de formules IIA, IIB, IIC et IID

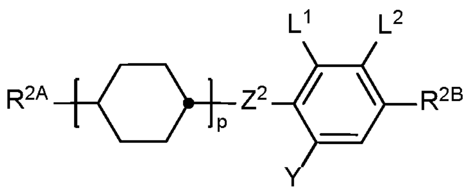

IIA

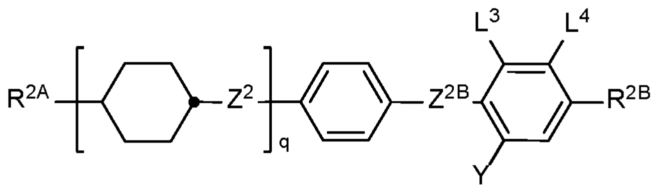

IIB

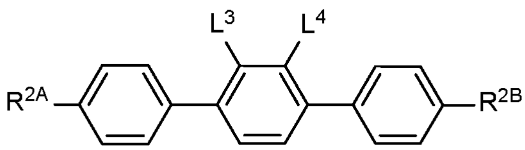

IIC

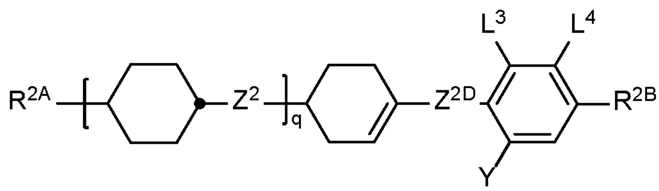

IID

dans lesquelles

$R^{2A}$ et $R^{2B}$ chacun, indépendamment l'un de l'autre, désignent H, un radical alkyle ou alcényle ayant jusqu'à 15 atomes de C qui est non substitué, monosubstitué par CN ou $CF_3$ ou au moins monosubstitué par halogène,

où, de plus, un ou plusieurs groupements $CH_2$ dans ces radicaux peuvent être remplacés par -O-, -S-,

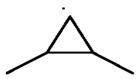, 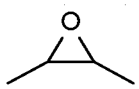, 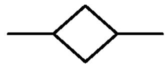, 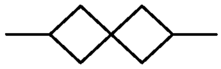,

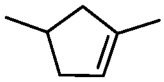, 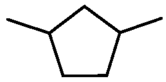,

-C≡C-, $-CF_2O-$, $-OCF_2-$, -OC-O- ou -O-CO- de telle sorte que les atomes de O ne soient pas liés directement les uns aux autres,
$L^1$ à $L^4$ chacun, indépendamment les uns des autres, désignent F, Cl, $CF_3$ ou $CHF_2$,
Y désigne H, F, Cl, $CF_3$, $CHF_2$ ou $CH_3$, préférablement H ou $CH_3$, particulièrement préférablement H,
$Z^2$, $Z^{2B}$ et $Z^{2D}$ chacun, indépendamment les uns des autres, désignent une liaison simple, $-CH_2CH_2-$, -CH=CH-, $-CF_2O-$, $-OCF_2-$, $-CH_2O-$, $-OCH_2-$, -COO-, -OCO-, $-C_2F_4-$, -CF=CF-, $-CH=CHCH_2O-$,
p désigne 0, 1 ou 2, et
q à chaque occurrence, de manière identique ou différente, désigne 0 ou 1.

12. Milieu LC selon l'une quelconque des revendications 1 à 11, **caractérisé en ce qu'**il comprend en outre un ou plusieurs composés de formule III

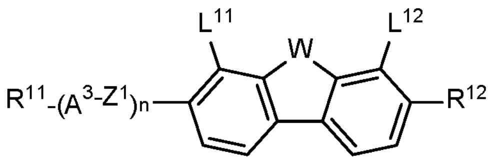

III

dans laquelle

$R^{11}$ et $R^{12}$ chacun, indépendamment l'un de l'autre, désignent H, un radical alkyle ou alcoxy ayant de 1 à 15 atomes de C, où un ou plusieurs groupements $CH_2$ dans ces radicaux peuvent chacun être remplacés, indépendamment les uns des autres, par

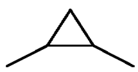, 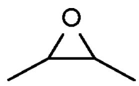, 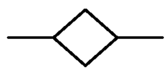, 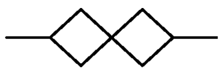,

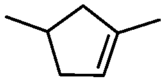, 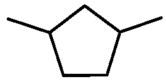,

-O-, -S-, -C≡C-, $-CF_2O-$, $-OCF_2-$, -CH=CH-, -OC-O- ou -O-CO- de telle sorte que les atomes de O ne soient pas liés directement les uns aux autres, et où, de plus, un ou plusieurs atomes de H peuvent être remplacés par halogène,
$A^3$ à chaque occurrence, indépendamment les uns des autres, désigne

a) un radical 1,4-cyclohexénylène ou 1,4-cyclohexylène, dans lequel un ou deux groupements $CH_2$ non adjacents peuvent être remplacés par -O- ou -S-,
b) un radical 1,4-phénylène, dans lequel un ou deux groupements CH peuvent être remplacés par N, ou
c) un radical choisi dans le groupe constitué par spiro[3.3]heptane-2,6-diyle, 1,4-bicyclo[2.2.2]octylène, naphtalène-2,6-diyle, décahydronaphtalène-2,6-diyle, 1,2,3,4-tétrahydronaphtalène-2,6-diyle, phénanthrène-2,7-diyle et fluorène-2,7-diyle,

où les radicaux a), b) et c) peuvent être mono- ou polysubstitués par des atomes d'halogène,
n désigne 0, 1 ou 2, préférablement 0 ou 1,

$Z^1$ à chaque occurrence indépendamment les uns des autres désigne -CO-O-, -O-CO-, $-CF_2O-$ , $-OCF_2-$, $-CH_2O-$, $-OCH_2-$, $-CH_2-$, $-CH_2CH_2-$, $-(CH_2)_4-$, $-CH=CH-CH_2O-$, $-C_2F_4-$, $-CH_2CF_2-$, $-CF_2CH_2-$, -CF=CF-, -CH=CF-, -CF=CH-, -CH=CH-, -C=C- ou une liaison simple,
$L^{11}$ et $L^{12}$ chacun, indépendamment l'un de l'autre, désignent F, Cl, $CF_3$ ou $CHF_2$, préférablement H ou F, tout préférablement F, et
W désigne O ou S.

**13.** Milieu LC selon l'une quelconque des revendications 1 à 12, **caractérisé en ce qu'**il comprend en outre un ou plusieurs composés de formule IV

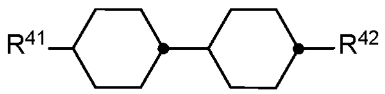

IV

dans laquelle

$R^{41}$ désigne un radical alkyle non substitué ayant de 1 à 7 atomes de C ou un radical alcényle non substitué ayant de 2 à 7 atomes de C, préférablement un radical n-alkyle, particulièrement préférablement ayant 2, 3, 4 ou 5 atomes de C, et
$R^{42}$ désigne un radical alkyle non substitué ayant de 1 à 7 atomes de C ou un radical alcoxy non substitué ayant de 1 à 6 atomes de C, tous deux ayant préférablement de 2 à 5 atomes de C, un radical alcényle non substitué ayant de 2 à 7 atomes de C, préférablement ayant 2, 3 ou 4 atomes de C, plus préférablement un radical vinyle ou un radical 1-propényle et en particulier un radical vinyle.

**14.** Milieu LC selon l'une quelconque des revendications 1 à 13, **caractérisé en ce qu'**il comprend en outre un ou plusieurs composés de formule V

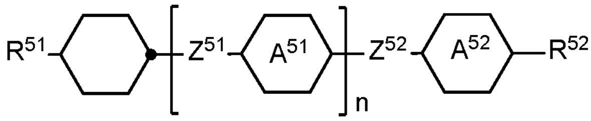

V

dans laquelle

$R^{51}$ et $R^{52}$ indépendamment l'un de l'autre, revêtent l'une des significations données pour $R^{41}$ et $R^{42}$ et préférablement désignent alkyle ayant de 1 à 7 atomes de C, préférablement n-alkyle, particulièrement préférablement n-alkyle ayant de 1 à 5 atomes de C, alcoxy ayant de 1 à 7 atomes de C, préférablement n-alcoxy, particulièrement préférablement n-alcoxy ayant de 2 à 5 atomes de C, alcoxyalkyle, alcényle ou alcényloxy ayant de 2 à 7 atomes de C, ayant préférablement de 2 à 4 atomes de C, préférablement alcényloxy,

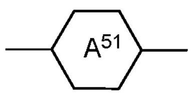 , 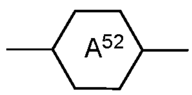 ,

de manière identique ou différente, désignent

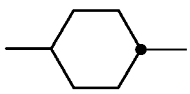 , 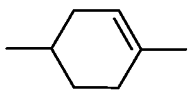 , 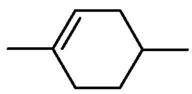 ,

, 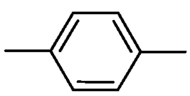 , 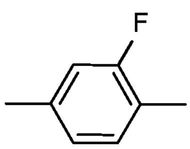 ou 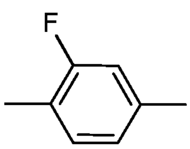

où

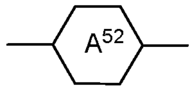

préférablement désigne

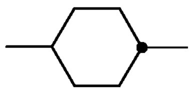 ou 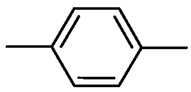 ,

$Z^{51}$ , $Z^{52}$ chacun, indépendamment l'un de l'autre, désignent $-CH_2-CH_2-$, $-CH_2-O-$,-CH=CH-, -C≡C-, -COO- ou une liaison simple, préférablement $-CH_2-CH_2-$, $-CH_2-O-$ ou une liaison simple et particulièrement préférablement une liaison simple, et

n vaut 1 ou 2.

**15.** Milieu LC selon l'une quelconque des revendications 1 à 14, **caractérisé en ce qu'**il comprend en outre un ou plusieurs additifs choisis dans le groupe constitué par les stabilisants, les dopants chiraux, les initiateurs de polymérisation et les additifs d'auto-alignement.

**16.** Procédé de préparation d'un milieu LC selon l'une ou plusieurs parmi les revendications 1 à 15, comprenant les étapes de mélange d'un ou plusieurs composés polymérisables de formule I tels que définis selon l'une ou plusieurs parmi les revendications 1 à 6, avec un ou plusieurs composés de formule II, III, IV et/ou V tels que définis selon l'une ou plusieurs parmi les revendications 1 ou 9 à 12, et éventuellement avec un ou plusieurs autres composés polymérisables tels que définis selon l'une ou plusieurs parmi les revendications 7 à 10, et éventuellement avec d'autres composés cristallins liquides et/ou des additifs, et éventuellement la polymérisation des composés polymérisables.

**17.** Affichage LC comprenant un milieu LC tel que défini selon l'une ou plusieurs parmi les revendications 1 à 15.

**18.** Affichage LC selon la revendication 17, qui est un affichage PS-VA, PS-IPS, PS-FFS, PS-UB-FFS ou SA-VA.

**19.** Affichage LC selon la revendication 17 ou 18, **caractérisé en ce qu'**il comprend deux substrats, au moins l'un d'entre eux étant transparent à la lumière, une électrode fournie sur chaque substrat ou deux électrodes fournies sur seulement l'un des substrats, et, située entre les substrats, une couche d'un milieu LC selon l'une ou plusieurs parmi les revendications 1 à 15, où les composés polymérisables sont polymérisés entre les substrats de l'affichage par photopolymérisation UV.

**20.** Procédé de production d'un affichage LC selon la revendication 19, comprenant les étapes de mise à disposition d'un milieu LC selon l'une ou plusieurs parmi les revendications 1 à 15 entre les substrats de l'affichage, et la polymérisation des composés polymérisables par irradiation par de la lumière UV, préférablement tandis qu'une tension est appliquée aux électrodes de l'affichage.

**21.** Procédé selon la revendication 20, **caractérisé en ce que** la lumière UV présente une longueur d'onde dans la plage allant de 350 à <370 nm.

**22.** Procédé selon la revendication 20 ou 21, **caractérisé en ce que** l'irradiation par la lumière UV est effectuée à l'aide d'une lampe UV-LED.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3587536 A1
- US 20060066793 A1
- US 20130182202 A1
- US 20140838581 A1
- US 20150166890 A1
- US 20150252265 A1
- DE 2209127 A
- DE 2240864 A
- DE 2321632 A
- DE 2338281 A
- DE 2450088 A
- DE 2637430 A
- DE 2853728 A
- EP 0364538 A
- DE 2636684 A
- DE 3321373 A

### Non-patent literature cited in the description

- *Pure Appl. Chem.,* 2001, vol. 73 (5), 888
- **C. TSCHIERSKE ; G. PELZL ; S. DIELE.** *Angew. Chem.,* 2004, vol. 116, 6340-6368
- **HALLER et al.** *Mol. Cryst. Liq. Cryst.,* 1973, vol. 24, 249-258
- Merck Liquid Crystals, Physical Properties of Liquid Crystals. Merck KGaA, November 1997